# EUROPEAN PATENT SPECIFICATION

(11) **EP 3 428 171 B1**
(45) Date of publication and mention of the grant of the patent: **16.09.2020**
(21) Application number: 17763558.8
(22) Date of filing: 08.03.2017
(51) Int. Cl.: C07F 5/02, G02F 1/1335

(54) **COMPOUND AND COLOR CONVERSION FILM COMPRISING SAME**
VERBINDUNG UND FARBUMWANDLUNGSFOLIE DAMIT
COMPOSÉ ET FILM DE CONVERSION DE COULEUR COMPRENANT CELUI-CI

(30) Priority: 08.03.2016 KR 20160027736
(43) Date of publication of application: 16.01.2019
(73) Proprietor: LG Chem, Ltd., Seoul 07336 (KR)
(72) Inventor: SUNG, Jiyeon, Daejeon 34122 (KR); LEE, Hoyong, Daejeon 34122 (KR); SONG, Cheol Jun, Daejeon 34122 (KR)
(74) Representative: Goddar, Heinz J.
(86) International application number: PCT/KR2017/002494
(87) International publication number: WO 2017/155297

(56) References cited:
- EP-A1- 3 305 870
- WO-A1-2016/190283
- JP-B2- 4 827 434
- KR-B1- 101 590 299
- KR-B1- 101 590 299
- EDUARDO PEÑA-CABRERA ET AL: "Simple, General, and Efficient Synthesis of Meso-Substituted Borondipyrromethenes from a Single Platform", ORGANIC LETTERS, AMERICAN CHEMICAL SOCIETY, US, vol. 9, no. 20, 27 September 2007 (2007-09-27), pages 3985-3988, XP008118492, ISSN: 1523-7060, DOI: 10.1021/OL7016615 [retrieved on 2007-09-01]
- FINDLAY, N. J. ET AL.: 'An Organic Down-Converting Material for White-Light Emission from Hybrid LEDs' ADVANCED MATERIALS vol. 26, no. 43, 2014, pages 7290 - 7294, XP055530050
- TOBISU, M. ET AL.: 'Palladium(II)-catalyzed Synthesis of Dibenzothiophene Derivatives via the Cleavage of Carbon-sulfur and Carbon-hydrogen Bonds' CHEMICAL SCIENCE vol. 7, no. 4, 21 January 2016, pages 2587 - 2591, XP055519591

## Description

### [Technical Field]

The present disclosure relates to a novel compound, and a color conversion film, a backlight unit and a display apparatus including the same.

### [Background Art]

Existing light emitting diodes (LED) are obtained by mixing a green phosphorescent substance and a red phosphorescent substance to a blue light emitting diode, or mixing a yellow phosphorescent substance and a blue-green phosphorescent substance to a UV light emitting diode. However, with such a method, it is difficult to control colors, and therefore, color rendering is not favorable. Accordingly, color gamut declines.

In order to overcome such color gamut decline and reduce production costs, methods of obtaining green and red in a manner of filming quantum dots and binding the dots to a blue LED have been recently tried. However, cadmium series quantum dots have safety problems, and other quantum dots have significantly decreased efficiency compared to cadmium series quantum dots. In addition, quantum dots have reduced stability for oxygen and water, and have a disadvantage in that the performance is significantly degraded when aggregated. Furthermore, unit costs of production are high since, when producing quantum dots, maintaining the sizes is difficult.

### Prior Art Documents

### Patent Documents

Korean Patent Application Laid-Open Publication No. 2000-0011622.

KR 101 509 299 B1 relates to a novel compound, and a color conversion film, a backlight unit, and a display device comprising the same.

### Non-Patent Literature

E. Pena-Cabrera et al., Organic Letters, ACS, vol. 9, no. 20, 2007-09-27, p. 3985-8 discloses a simple, general and efficient synthesis of meso-substituted borondipyrromethenes from a single platform.

### [Disclosure]

### [Technical Problem]

The present specification provides a novel compound, and a color conversion film, a backlight unit and a display apparatus including the same.

### [Technical Solution]

One embodiment of the present specification provides a compound represented by the following Chemical Formula 1.

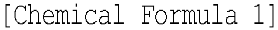

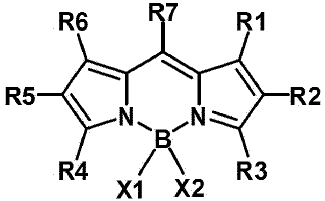

In Chemical Formula 1,
X1 and X2 are the same as or different from each other, and each independently a halogen group; a nitrile group; a substituted or unsubstituted alkyl group; or a substituted or unsubstituted alkoxy group,
R1, R3, R4 and R6 are the same as or different from each other, and each independently
a phenyl group unsubstituted or substituted with a nitrile group, a halogen group, an arylamine group, an alkoxy group or an alkyl group unsubstituted or substituted with a halogen group; a pyridyl group unsubstituted or substituted with an alkyl group; or a dibenzofuranyl group;
R2 and R5 are the same as or different from each other, and each independently
hydrogen; a fluoro group; a nitrile group; a methylester group; a phenylester group; a methylsulfoxy group; a methyl group substituted with a phenyl group substituted with a nitro group; an ethyl group; an n-propyl group; a coumarin group; a phenyl group unsubstituted or substituted with a fluoro group, a trifluoromethyl group, a phenyl group, a biphenyl group, or a triazinyl group substituted with a phenyl group; a biphenyl group substituted with a phenyl group; a terphenyl group; a pyrimidyl group; a furanyl group; a naphthyl group; a quinolyl group; a benzothiadiazolyl group; a phenanthrenyl group; a pyrenyl group; a triphenylenyl group; a spirobifluorenyl group; or a fluoranthenyl group;R7 is a group represented by the following Chemical Formula 2;R7 is a group represented by the following Chemical Formula 2, 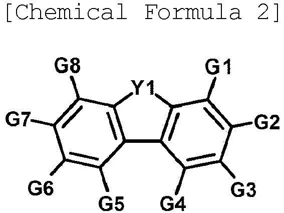 in Chemical Formula 2,
Y1 is O or S,
any one of G1 to G8 is a site bonding to Chemical Formula 1, and the rest are the same as or different from each other and each independently hydrogen; or adjacent groups bond to each other to form a ring substituted with R',
when adjacent groups among G1 to G8 bond to each other to form a ring substituted with R', any one of groups among G1 to G8 not forming the ring by the adjacent group bonding to each other and R' is a site bonding to Chemical Formula 1, and the rest of R' are hydrogen.

Another embodiment of the present specification provides a color conversion film including a resin matrix; and the compound represented by Chemical Formula 1 dispersed into the resin matrix.

Still another embodiment of the present specification provides a backlight unit including the color conversion film.

Yet another embodiment of the present specification provides a display apparatus including the backlight unit.

### [Advantageous Effects]

A metal complex according to one embodiment of the present specification, that is, a compound represented by Chemical Formula 1, is stable for water or oxygen as well as having high fluorescence efficiency, and have low unit costs of production compared to quantum dots. Accordingly, by using the compound represented by Chemical Formula 1 described in the present specification as a fluorescent material of a color conversion film, a color conversion film having excellent luminance and color gamut, and with simple manufacturing process and low manufacturing costs can be provided.

### [Description of Drawings]

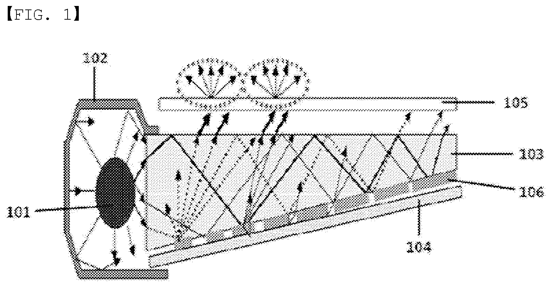

FIG. 1 is a mimetic diagram using a color conversion film according to one embodiment of the present specification in a backlight.

### Reference Numeral

101: Side Chain-Type Light Source
102: Reflecting Plate
103: Light Guide Plate
104: Reflective Layer
105: Color Conversion Film
106: Light Dispersion Pattern

### [Mode for Disclosure]

Hereinafter, the present disclosure will be described in more detail.

A color conversion film according to one embodiment of the present specification provides a compound represented by Chemical Formula 1.

The compound represented by Chemical Formula 1 according to one embodiment of the present specification is a pyrromethene compound having boron metal as a complex, and by R7 of Chemical Formula 1 having a substituent represented by Chemical Formula 2, a full width at half maximum (FWHM) is narrow, and high quantum efficiency is obtained.

In the present specification, a certain part "including" certain constituents means capable of further including other constituents, and does not exclude other constituents unless particularly stated on the contrary.

In the present specification, one member being placed "on" another member includes not only a case of the one member adjoining the another member but a case of still another member being present between the two members.

Examples of the substituents in the present specification are described below, however, the substituents are not limited thereto.

The term "substitution" means a hydrogen atom bonding to a carbon atom of a compound is changed to another substituent, and the position of substitution is not limited as long as it is a position at which the hydrogen atom is substituted, that is, a position at which a substituent can substitute, and when two or more substituents substitute, the two or more substituents may be the same as or different from each other.

The term "substituted or unsubstituted" in the present specification means being substituted with one, two or more substituents selected from the group consisting of deuterium; a halogen group; a nitrile group; a nitro group; an imide group; an amide group; a carbonyl group; an ester group; a hydroxyl group; a substituted or unsubstituted alkyl group; a substituted or unsubstituted cycloalkyl group; a substituted or unsubstituted alkoxy group; a substituted or unsubstituted aryloxy group; a substituted or unsubstituted alkylthioxy group; a substituted or unsubstituted arylthioxy group; a substituted or unsubstituted alkylsulfoxy group; a substituted or unsubstituted arylsulfoxy group; a substituted or unsubstituted alkenyl group; a substituted or unsubstituted silyl group; a substituted or unsubstituted boron group; a substituted or unsubstituted amine group; a substituted or unsubstituted arylphosphine group; a substituted or unsubstituted phosphine oxide group; a substituted or unsubstituted aryl group; and a substituted or unsubstituted heterocyclic group, or being substituted with a substituent linking two or more substituents among the substituents illustrated above, or having no substituents. For example, "a substituent linking two or more substituents" may include a biphenyl group. In other words, a biphenyl group may be an aryl group, or interpreted as a substituent linking two phenyl groups.

In the present specification, 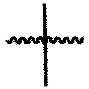 means a site bonding to other substituents or bonding sites.

In the present specification, the halogen group may be a fluoro group, a chloro group, a bromo group or an iodo group.

In the present specification, the number of carbon atoms of the imide group is not particularly limited, but is preferably from 1 to 30. Specifically, compounds having structures as below may be included, however, the imide group is not limited thereto.

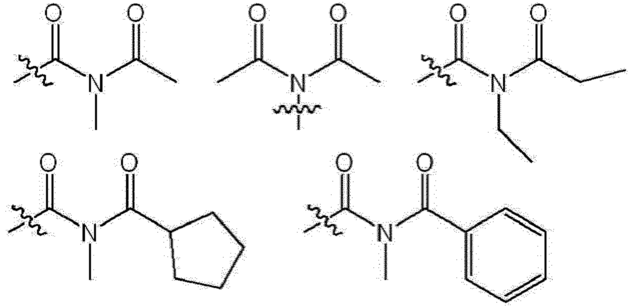

In the present specification, in the amide group, the nitrogen of the amide group may be substituted with hydrogen, a linear, branched or cyclic alkyl group having 1 to 30 carbon atoms or an aryl group having 6 to 30 carbon atoms. Specifically, compounds having the following structural formulae may be included, however, the amide group is not limited thereto.

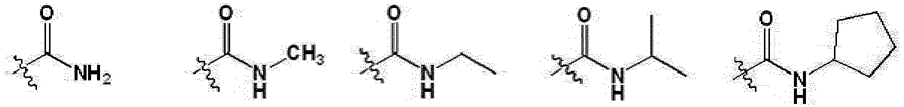

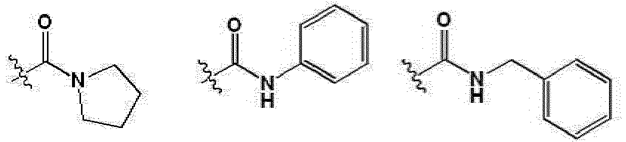

In the present specification, the number of carbon atoms of the carbonyl group is not particularly limited, but is preferably from 1 to 30. Specifically, compounds having structures as below may be included, however, the carbonyl group is not limited thereto.

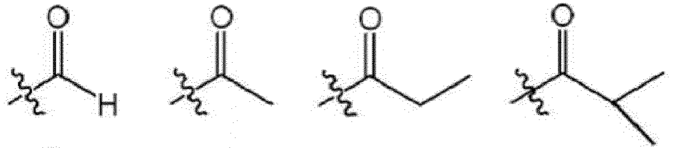

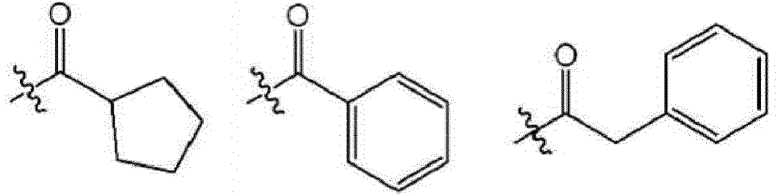

In the present specification, in the ester group, the oxygen of the ester group may be substituted with a linear, branched or cyclic alkyl group having 1 to 25 carbon atoms or an aryl group having 6 to 30 carbon atoms. Specifically, compounds having the following structural formulae may be included, however, the ester group is not limited thereto.

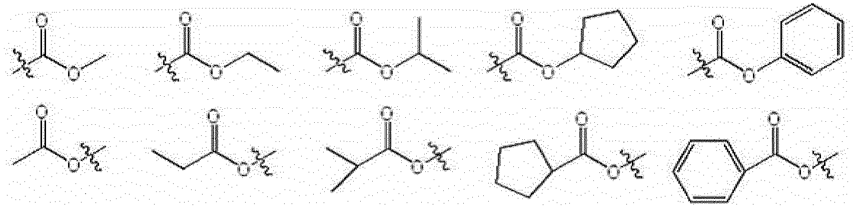

In the present specification, the alkyl group may be linear or branched, and the number of carbon atoms is not particularly limited, but is preferably from 1 to 30. Specific examples thereof may include methyl, ethyl, propyl, n-propyl, isopropyl, butyl, n-butyl, isobutyl, tert-butyl, sec-butyl, 1-methyl-butyl, 1-ethyl-butyl, pentyl, n-pentyl, isopentyl, neopentyl, tert-pentyl, hexyl, n-hexyl, 1-methylpentyl, 2-methylpentyl, 4-methyl-2-pentyl, 3,3-dimethylbutyl, 2-ethylbutyl, heptyl, n-heptyl, 1-methylhexyl, cyclopentylmethyl, cyclohexylmethyl, octyl, n-octyl, tert-octyl, 1-methylheptyl, 2-ethylhexyl, 2-propylpentyl, n-nonyl, 2,2-dimethylheptyl, 1-ethyl-propyl, 1,1-dimethyl-propyl, isohexyl, 2-methylpentyl, 4-methylhexyl, 5-methylhexyl and the like, but are not limited thereto.

In the present specification, the cycloalkyl group is not particularly limited, but preferably has 3 to 30 carbon atoms, and specific examples thereof may include cyclopropyl, cyclobutyl, cyclopentyl, 3-methylcyclopentyl, 2,3-dimethylcyclopentyl, cyclohexyl, 3-methylcyclohexyl, 4-methylcyclohexyl, 2,3-dimethylcyclohexyl, 3,4,5-trimethylcyclohexyl, 4-tert-butylcyclohexyl, cycloheptyl, cyclooctyl and the like, but are not limited thereto.

In the present specification, the alkoxy group may be linear, branched or cyclic. The number of carbon atoms of the alkoxy group is not particularly limited, but is preferably from 1 to 30. Specific examples thereof may include methoxy, ethoxy, n-propoxy, isopropoxy, n-butoxy, isobutoxy, tert-butoxy, sec-butoxy, n-pentyloxy, neopentyloxy, isopentyloxy, n-hexyloxy, 3,3-dimethylbutyloxy, 2-ethylbutyloxy, n-octyloxy, n-nonyloxy, n-decyloxy, benxyloxy, p-methylbenxyloxy and the like, but are not limited thereto.

In the present specification, the amine group may be selected from the group consisting of -NH₂; a monoalkylamine group; a dialkylamine group; an N-alkylarylamine group; a monoarylamine group; a diarylamine group; an N-arylheteroarylamine group; an N-alkylheteroarylamine group, a monoheteroarylamine group and a diheteroarylamine group, and the number of carbon atoms is, although not particularly limited thereto, preferably from 1 to 30. Specific examples of the amine group may include a methylamine group, a dimethylamine group, an ethylamine group, a diethylamine group, a phenylamine group, a naphthylamine group, a biphenylamine group, an anthracenylamine group, a 9-methyl-anthracenylamine group, a diphenylamine group, a ditolylamine group, an N-phenyltolylamine group, a triphenylamine group, an N-phenylbiphenylamine group; an N-phenylnaphthylamine group; an N-biphenylnaphthylamine group; an N-naphthylfluorenylamine group; an N-phenylphenanthrenylamine group; an N-biphenylphenanthrenylamine group; an N-phenylfluorenylamine group; an N-phenylterphenylamine group; an N-phenanthrenylfluorenylamine group; an N-biphenylfluorenylamine group and the like, but are not limited thereto.

In the present specification, the N-alkylarylamine group means an amine group in which N of the amine group is substituted with an alkyl group and an aryl group.

In the present specification, the N-arylheteroarylamine group means an amine group in which N of the amine group is substituted with an aryl group and a heteroaryl group.

In the present specification, the N-alkylheteroarylamine group means an amine group in which N of the amine group is substituted with an alkyl group and a heteroaryl group.

In the present specification, the alkyl group in the alkylamine group, the N-alkylarylamine group, the alkylthioxy group, the alkylsulfoxy group and the N-alkylheteroarylamine group is the same as the examples of the alkyl group described above. Specific examples of the alkylthioxy group may include a methylthioxy group, an ethylthioxy group, a tert-butylthioxy group, a hexylthioxy group, an octylthioxy group and the like, and specific examples of the alkylsulfoxy group may include mesyl, an ethylsulfoxy group, a propylsulfoxy group, a butylsulfoxy group and the like, however, the examples are not limited thereto.

In the present specification, the alkenyl group may be linear or branched, and although not particularly limited thereto, the number of carbon atoms is preferably from 2 to 30. Specific examples thereof may include vinyl, 1-propenyl, isopropenyl, 1-butenyl, 2-butenyl, 3-butenyl, 1-pentenyl, 2-pentenyl, 3-pentenyl, 3-methyl-1-butenyl, 1,3-butadienyl, allyl, 1-phenylvinyl-1-yl, 2-phenylvinyl-1-yl, 2,2-diphenylvinyl-1-yl, 2-phenyl-2-(naphthyl-1-yl)vinyl-1-yl, 2,2-bis(diphenyl-1-yl)vinyl-1-yl, a stilbenyl group, a styrenyl group and the like, but are not limited thereto.

In the present specification, specific examples of the silyl group may include a trimethylsilyl group, a triethylsilyl group, a t-butyldimethylsilyl group, a vinyldimethylsilyl group, a propyldimethylsilyl group, a triphenylsilyl group, a diphenylsilyl group, a phenylsilyl group and the like, but are not limited thereto.

In the present specification, the boron group may be - BR₁₀₀R₁₀₁, and R₁₀₀ and R₁₀₁ are the same as or different from each other and may be each independently selected from the group consisting of hydrogen; deuterium; halogen; a nitrile group; a substituted or unsubstituted monocyclic or multicyclic cycloalkyl group having 3 to 30 carbon atoms; a substituted or unsubstituted linear or branched alkyl group having 1 to 30 carbon atoms; a substituted or unsubstituted monocyclic or multicyclic aryl group having 6 to 30 carbon atoms; and a substituted or unsubstituted monocyclic or multicyclic heteroaryl group having 2 to 30 carbon atoms.

In the present specification, specific examples of the phosphine oxide group may include a diphenylphosphine oxide group, a dinaphthylphosphine oxide group and the like, but are not limited thereto.

In the present specification, the aryl group is not particularly limited, but preferably has 6 to 30 carbon atoms, and the aryl group may be monocyclic or multicyclic.

When the aryl group is a monocyclic aryl group, the number of carbon atoms is not particularly limited, but is preferably from 6 to 30. Specific examples of the monocyclic aryl group may include a phenyl group, a biphenyl group, a terphenyl group and the like, but are not limited thereto.

When the aryl group is a multicyclic aryl group, the number of carbon atoms is not particularly limited, but is preferably from 10 to 30. Specific examples of the multicyclic aryl group may include a naphthyl group, an anthracenyl group, a phenanthryl group, a triphenyl group, a pyrenyl group, a perylenyl group, a chrysenyl group, a fluorenyl group and the like, but are not limited thereto.

In the present specification, the fluorenyl group may be substituted, and adjacent groups may bond to each other to form a ring.

When the fluorenyl group is substituted, 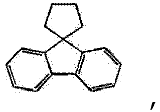 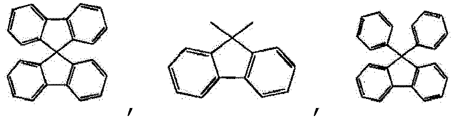 and the like may be included. However, the compound is not limited thereto.

In the present specification, an "adjacent" group may mean a substituent substituting an atom directly linking to an atom substituted by the corresponding substituent, a substituent sterically most closely positioned to the corresponding substituent, or another substituent substituting an atom substituted by the corresponding substituent. For example, two substituents substituting ortho positions in a benzene ring, and two substituents substituting the same carbon in an aliphatic ring may be interpreted as groups "adjacent" to each other.

In the present specification, the aryl group in the aryloxy group, the arylthioxy group, the arylsulfoxy group, the N-alkylarylamine group, the N-arylheteroarylamine group and the arylphosphine group may be same as the examples of the aryl group described above. Specific examples of the aryloxy group may include a phenoxy group, a p-tolyloxy group, an m-tolyloxy group, a 3,5-dimethyl-phenoxy group, a 2,4,6-trimethylphenoxy group, a p-tert-butylphenoxy group, a 3-biphenyloxy group, a 4-biphenyloxy group, a 1-naphthyloxy group, a 2-naphthyloxy group, a 4-methyl-1-naphthyloxy group, a 5-methyl-2-naphthyloxy group, a 1-anthryloxy group, a 2-anthryloxy group, a 9-anthryloxy group, a 1-phenanthryloxy group, a 3-phenanthryloxy group, a 9-phenanthryloxy group and the like, and specific examples of the arylthioxy group may include a phenylthioxy group, a 2-methylphenylthioxy group, a 4-tert-butylphenylthioxy group and the like, and specific examples of the arylsulfoxy group may include a benzenesulfoxy group, a p-toluenesulfoxy group and the like, however, the examples are not limited thereto.

In the present specification, examples of the arylamine group include a substituted or unsubstituted monoarylamine group, a substituted or unsubstituted diarylamine group, or a substituted or unsubstituted triarylamine group. The aryl group in the arylamine group may be a monocyclic aryl group or a multicyclic aryl group. The arylamine group including two or more aryl groups may include monocyclic aryl groups, multicyclic aryl groups, or both monocyclic aryl groups and multicyclic aryl groups. For example, the aryl group in the arylamine group may be selected from among the examples of the aryl group described above.

In the present specification, the heteroaryl group is a group including one or more atoms that are not carbon, that is, heteroatoms, and specifically, the heteroatom may include one or more atoms selected from the group consisting of O, N, Se, S and the like. The number of carbon atoms is not particularly limited, but is preferably from 2 to 30, and the heteroaryl group may be monocyclic or multicyclic. Examples of the heterocyclic group may include a thiophene group, a furanyl group, a pyrrole group, an imidazolyl group, a thiazolyl group, an oxazolyl group, an oxadiazolyl group, a pyridyl group, a bipyridyl group, a pyrimidyl group, a triazinyl group, a triazolyl group, an acridyl group, a pyridazinyl group, a pyrazinyl group, a qinolinyl group, a quinazolinyl group, a quinoxalinyl group, a phthalazinyl group, a pyridopyrimidyl group, a pyridopyrazinyl group, a pyrazinopyrazinyl group, an isoquinolinyl group, an indolyl group, a carbazolyl group, a benzoxazolyl group, a benzimidazolyl group, a benzothiazolyl group, a benzocarbazolyl group, a benzothiophene group, a dibenzothiophene group, a benzofuranyl group, a phenanthrolinyl group, an isoxazolyl group, a thiadiazolyl group, a phenothiazinyl group, a dibenzofuranyl group and the like, but are not limited thereto.

In the present specification, in the coumarin group, the carbon of the coumarin group may be substituted with a halogen group, a nitrile group, a linear, branched or cyclic alkyl group having 1 to 25 carbon atoms; an amine group; a linear or branched alkoxy group having 1 to 25 carbon atoms; or an aryl group having 6 to 30 carbon atoms. Specifically, compounds having the following structural formulae may be included, however, the coumarin group is not limited thereto.

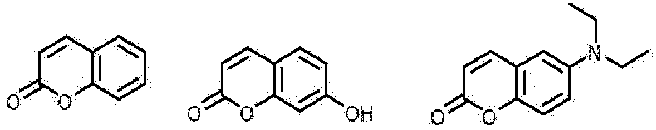

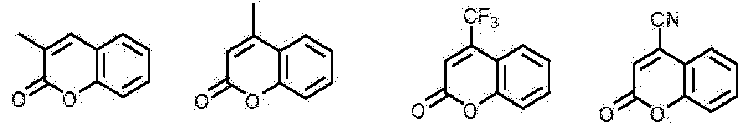

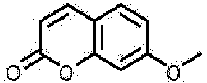

In the present specification, examples of the heteroarylamine group include a substituted or unsubstituted monoheteroarylamine group, a substituted or unsubstituted diheteroarylamine group, or a substituted or unsubstituted triheteroarylamine group. The heteroarylamine group including two or more heteroaryl groups may include monocyclic heteroaryl groups, multicyclic heteroaryl groups, or both monocyclic heteroaryl groups and multicyclic heteroaryl groups. For example, the heteroaryl group in the heteroarylamine group may be selected from among the examples of the heteroraryl group described above.

In the present specification, examples of the heteroaryl group in the N-arylheteroarylamine group and the N-alkylheteroarylamine group are the same as the examples of the heteroaryl group described above.

According to one embodiment of the present specification, Chemical Formula 2 is represented by any one of the following Chemical Formulae 2-1 to 2-3.

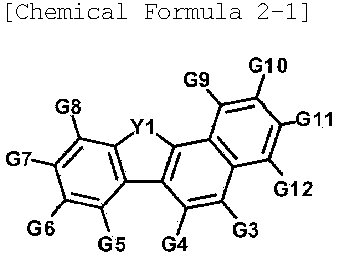

In Chemical Formula 2-1,
Y1 has the same definition as in Chemical Formula 2,
any one of G3 to G12 is a site bonding to Chemical Formula 1, and the rest are hydrogen, 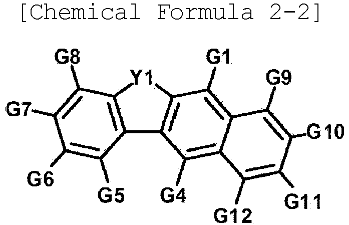 in Chemical Formula 2-2,
Y1 has the same definition as in Chemical Formula 2,
any one of G1 and G4 to G12 is a site bonding to Chemical Formula 1, and the rest are hydrogen, 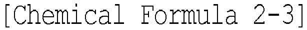 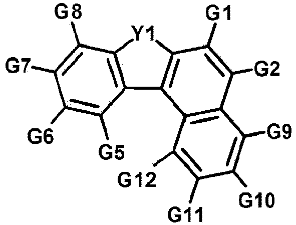
in Chemical Formula 2-3,
Y1 has the same definition as in Chemical Formula 2, and
any one of G1, G2 and G5 to G12 is a site bonding to Chemical Formula 1, and the rest are hydrogen.

According to one embodiment of the present specification, Chemical Formula 2 is represented by any one of the following Chemical Formulae 2-4 to 2-6.

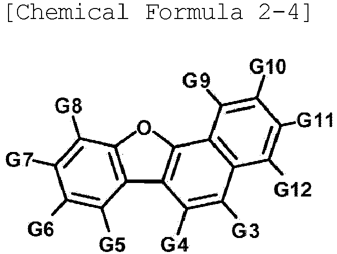

In Chemical Formula 2-4,
any one of G3 to G12 is a site bonding to Chemical Formula 1, and the rest are hydrogen, 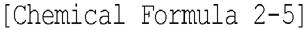 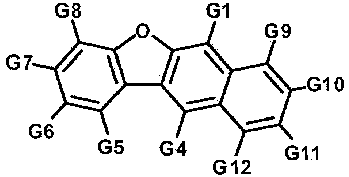 in Chemical Formula 2-5,
any one of G1 and G4 to G12 is a site bonding to Chemical Formula 1, and the rest are hydrogen, 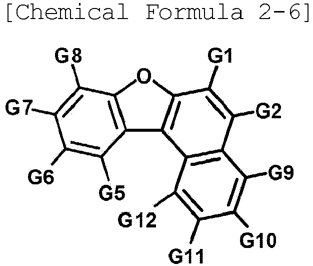 in Chemical Formula 2-6,
any one of G1, G2 and G5 to G12 is a site bonding to Chemical Formula 1, and the rest are hydrogen.

According to one embodiment of the present specification, Chemical Formula 2 is represented by any one of the following Chemical Formulae 2-7 to 2-9.

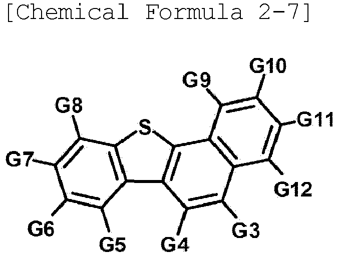

In Chemical Formula 2-7,
any one of G3 to G12 is a site bonding to Chemical Formula 1, and the rest are hydrogen, 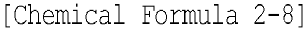 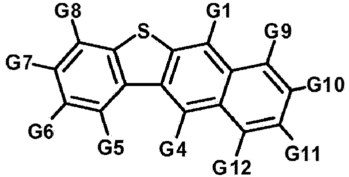 in Chemical Formula 2-8,
any one of G1 and G4 to G12 is a site bonding to Chemical Formula 1, and the rest are hydrogen, 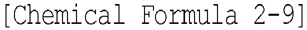 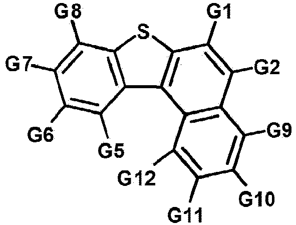 in Chemical Formula 2-9,
any one of G1, G2 and G5 to G12 is a site bonding to Chemical Formula 1, and the rest are hydrogen.

According to one embodiment of the present specification, Chemical Formula 1 is represented by any one of the following Chemical Formulae 1-1 to 1-4.

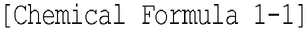

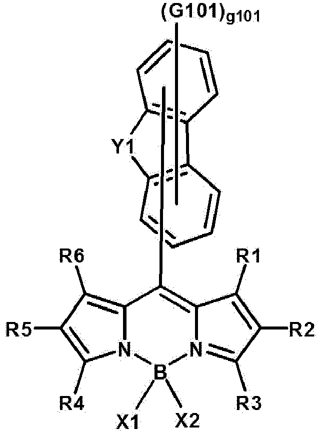

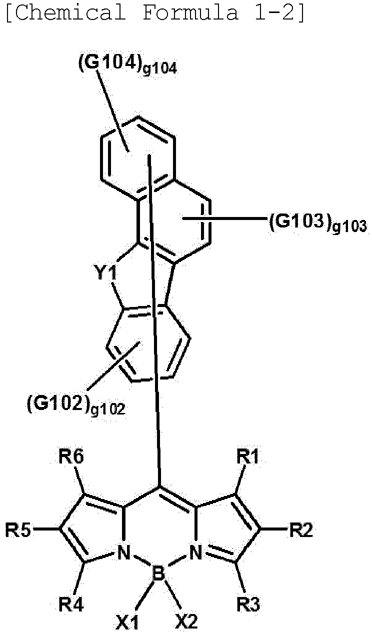

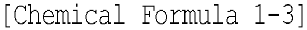

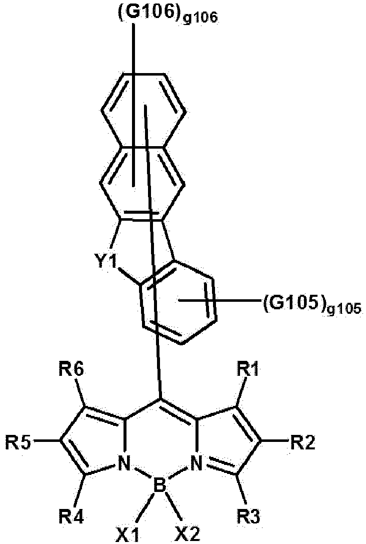

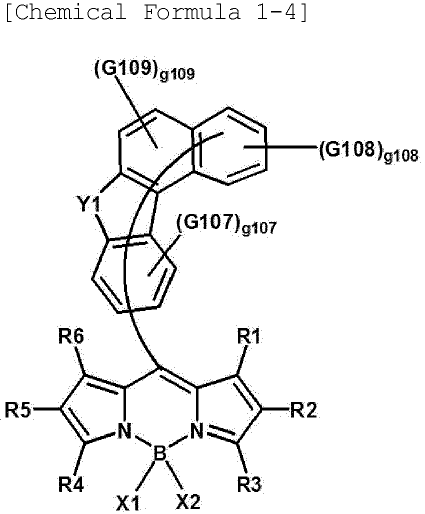

In Chemical Formulae 1-1 to 1-4,
R1 to R6, and X1 and X2 have the same definitions as in Chemical Formula 1,
Y1 has the same definition as in Chemical Formula 2,
G101 to G109 are hydrogen;
g101 is an integer of 1 to 7,
g102, g104, g105, g107 and g108 are each an integer of 1 to 4,
g103 and g109 are each 1 or 2,
g106 is an integer of 1 to 6,
3≤g102+g103+g104≤9,
2≤g105+g106≤9,
3≤g107+g108+g109≤9, and
when g101 to g109 are each a multiple number, structures in the parentheses are the same as or different from each other.

According to one embodiment of the present specification, Chemical Formula 1 is represented by any one of the following Chemical Formulae 1-5 to 1-8.

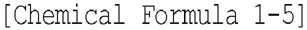

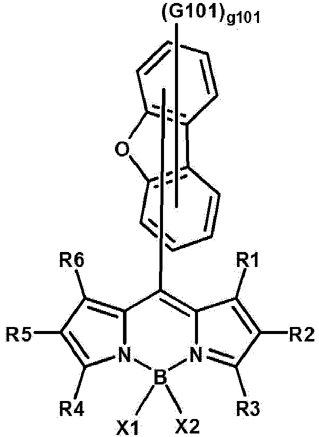

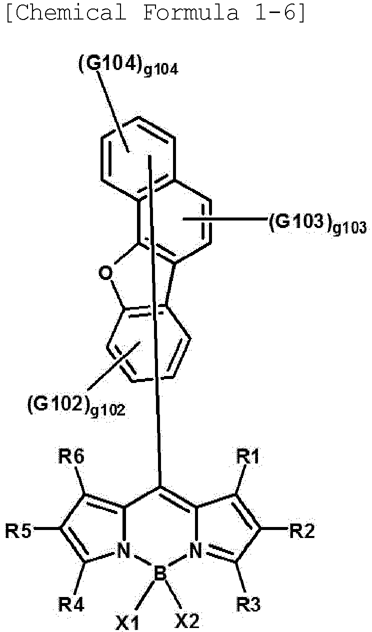

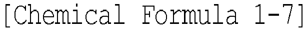

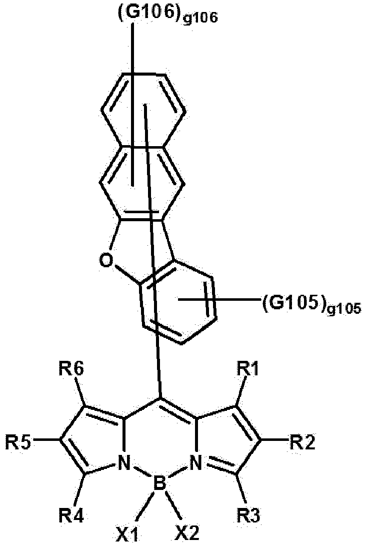

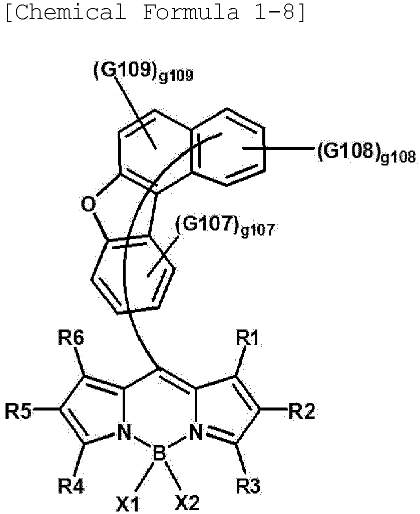

In Chemical Formulae 1-5 to 1-8,
R1 to R6, and X1 and X2 have the same definitions as in Chemical Formula 1,
G101 to G109 are hydrogen;
g101 is an integer of 1 to 7,
g102, g104, g105, g107 and g108 are each an integer of 1 to 4,
g103 and g109 are each 1 or 2,
g106 is an integer of 1 to 6,
3≤g102+g103+g104≤9,
2≤g105+g106≤9,
3≤g107+g108+g109≤9, and
when g101 to g109 are each a multiple number, structures in the parentheses are the same as or different from each other.

According to one embodiment of the present specification, Chemical Formula 1 is represented by any one of the following Chemical Formulae 1-9 to 1-12.

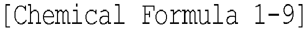

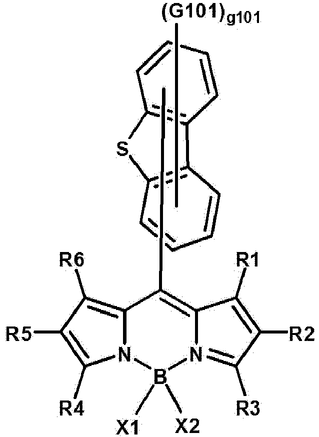

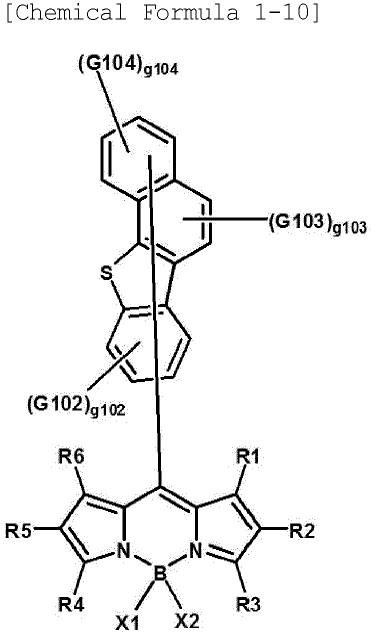

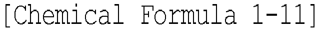

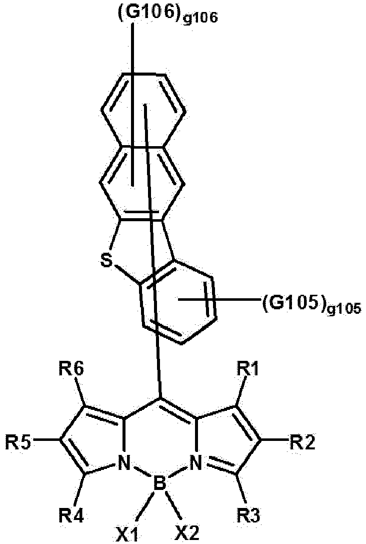

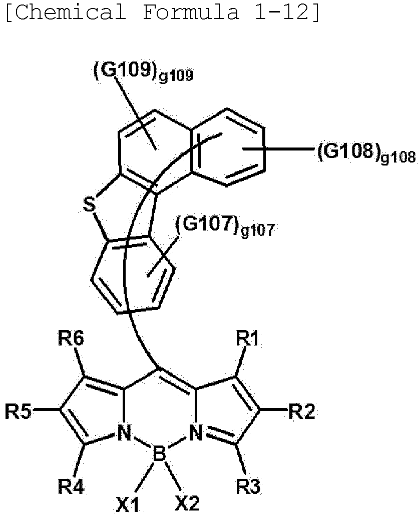

In Chemical Formulae 1-9 to 1-12,
R1 to R6, and X1 and X2 have the same definitions as in Chemical Formula 1,
G101 to G109 are hydrogen,
g101 is an integer of 1 to 7,
g102, g104, g105, g107 and g108 are each an integer of 1 to 4,
g103 and g109 are each 1 or 2,
g106 is an integer of 1 to 6,
3≤g102+g103+g104≤9,
2≤g105+g106≤9,
3≤g107+g108+g109≤9, and
when g101 to g109 are each a multiple number, structures in the parentheses are the same as or different from each other.

According to one embodiment of the present specification, in Chemical Formula 1, X1 and X2 are the same as or different from each other, and each independently a halogen group; a nitrile group; or an alkoxy group.

According to one embodiment of the present specification, in Chemical Formula 1, X1 and X2 are the same as or different from each other, and each independently a fluoro group; a nitrile group; or a methoxy group.

According to one embodiment of the present specification, in Chemical Formula 1, R1, R3, R4 and R6 are the same as or different from each other, and each independently a phenyl group unsubstituted or substituted with a nitrile group, a halogen group, an arylamine group, an alkoxy group or an alkyl group unsubstituted or substituted with a halogen group,; a pyridyl group unsubstituted or substituted with an alkyl group; or a dibenzofuranyl group.

According to one embodiment of the present specification, in Chemical Formula 1, R1, R3, R4 and R6 are the same as or different from each other, and each independently a phenyl group unsubstituted or substituted with a nitrile group, a fluoro group, a trifluoromethyl group, a t-butyl group, a diphenylamine group or a methoxy group; a pyridyl group unsubstituted or substituted with a methyl group; or a dibenzofuranyl group.

According to one embodiment of the present specification, in Chemical Formula 1, R2 and R5 are the same as or different from each other, and each independently hydrogen; a fluoro group; a nitrile group; a methylester group; a phenylester group; a methylsulfoxy group; a methyl group substituted with a phenyl group substituted with a nitro group; an ethyl group; an n-propyl group; a coumarin group; a phenyl group unsubstituted or substituted with a fluoro group, a trifluoromethyl group, a phenyl group, a biphenyl group, or a triazinyl group substituted with a phenyl group; a biphenyl group substituted with a phenyl group; a terphenyl group; a pyrimidyl group; a furanyl group; a naphthyl group; a quinolyl group; a benzothiadiazolyl group; a phenanthrenyl group; a pyrenyl group; a triphenylenyl group; a spirobifluorenyl group; or a fluoranthenyl group.

According to one embodiment of the present specification, the compound represented by Chemical Formula 1 has a maximum light emission peak present in 520 nm to 550 nm in a film state. Such a compound emits green light.

According to one embodiment of the present specification, the compound represented by Chemical Formula 1 has a maximum light emission peak present in 520 nm to 550 nm in a film state, and the light emission peak has a full width at half maximum of 50 nm or less. Having such a small full width at half maximum may further increase color gamut. Herein, it is preferable that the compound represented by Chemical Formula 1 have a light emission peak with a smaller full width at half maximum.

According to one embodiment of the present specification, the compound represented by Chemical Formula 1 has a maximum light emission peak present in 610 nm to 660 nm in a film state, and preferably present in 630 nm to 660 nm. Such a compound emits red light.

According to one embodiment of the present specification, the compound represented by Chemical Formula 1 has a maximum light emission peak present in 610 nm to 660 nm in a film state, and the light emission peak has a full width at half maximum of 60 nm or less. Having such a small full width at half maximum may further increase color gamut. Herein, the compound represented by Chemical Formula 1 may have a light emission peak with a full width at half maximum of 5 nm or greater.

According to one embodiment of the present specification, the compound represented by Chemical Formula 1 has a maximum light emission peak present in 630 nm to 660 nm in a film state, and the light emission peak has a full width at half maximum of 60 nm or less.

According to one embodiment of the present specification, the compound represented by Chemical Formula 1 has quantum efficiency of 0.76 or greater.

In the present specification, the "film state" means, instead of a solution state, a state prepared to a film form with the compound represented by Chemical Formula 1 alone or by mixing the compound represented by Chemical Formula 1 with other components that do not affect full width at half maximum and quantum efficiency measurements.

In the present specification, the full width at half maximum means a width of a light emission peak at a half of the maximum height in a maximum light emission peak of the light emitting from the compound represented by Chemical Formula 1.

In the present specification, the quantum efficiency may be measured using methods known in the art, and for example, may be measured using an integrating sphere.

According to one embodiment of the present specification, Chemical Formula 1 is selected from among the following compounds.

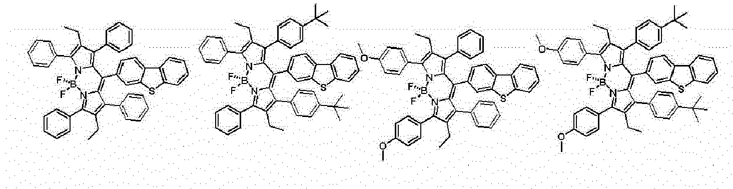

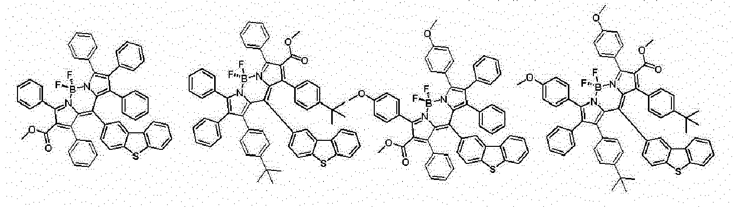

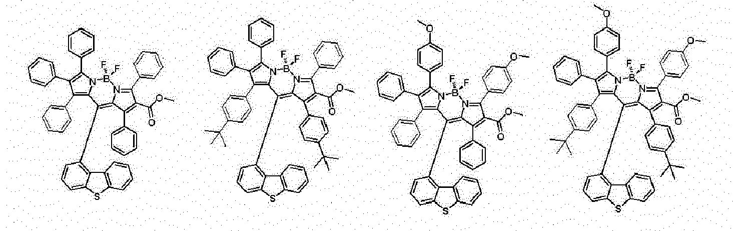

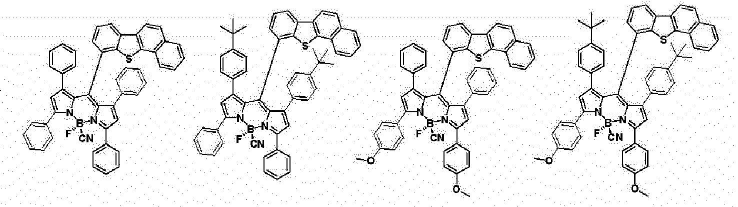

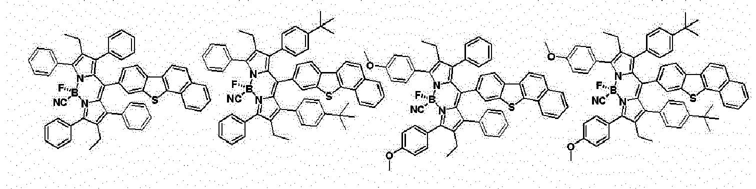

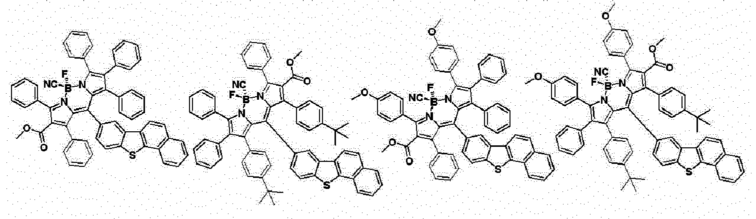

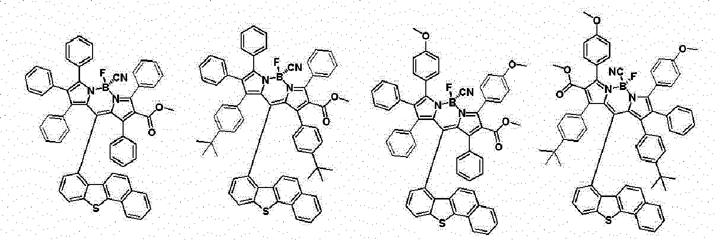

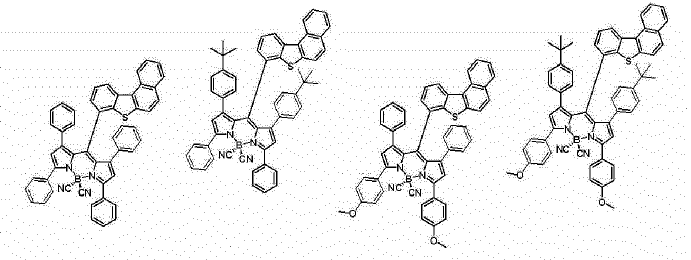

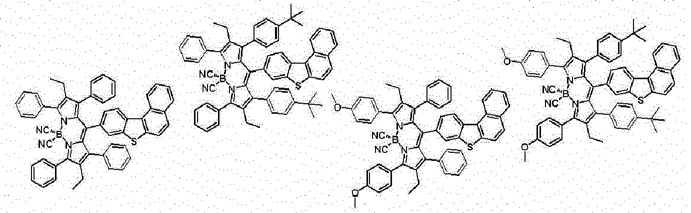

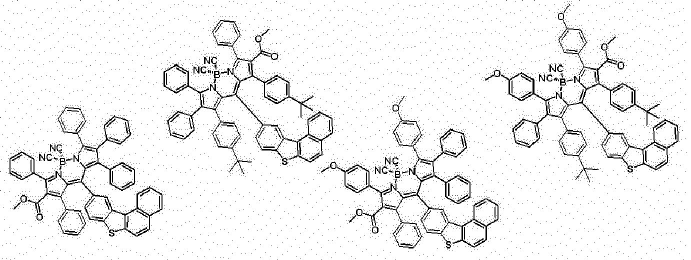

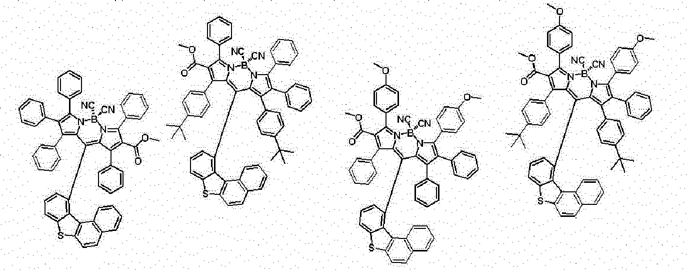

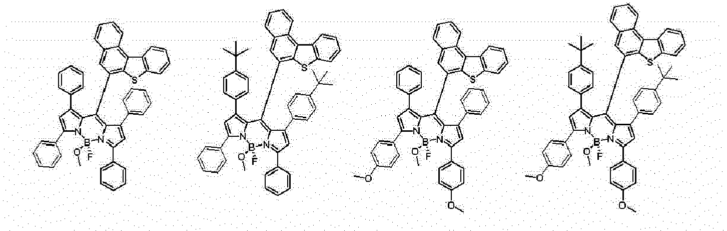

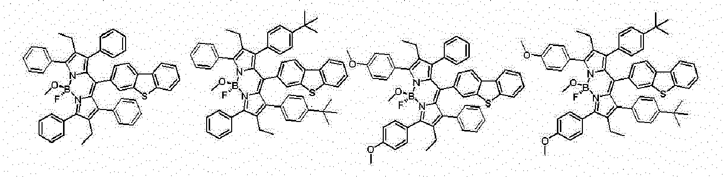

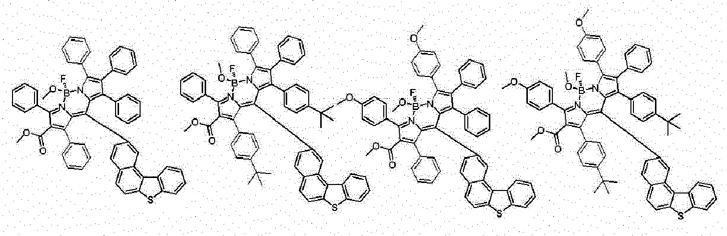

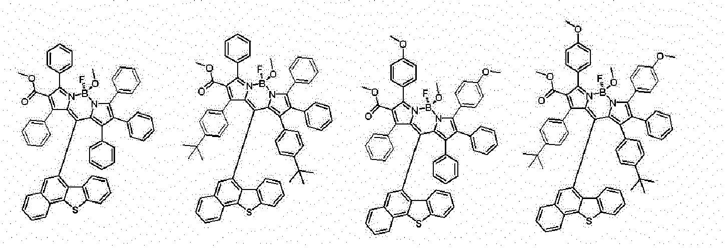

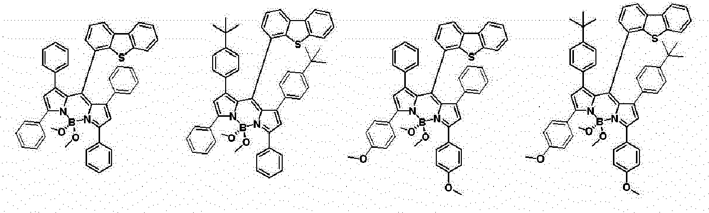

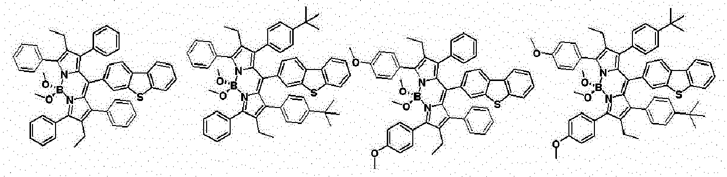

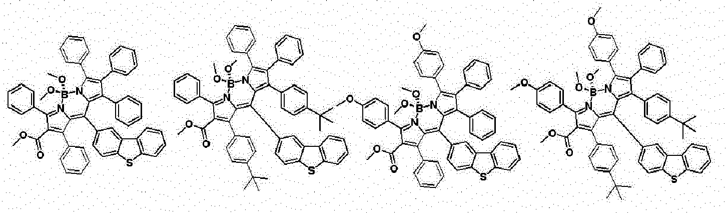

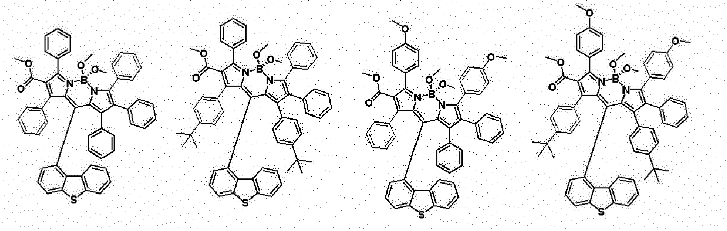

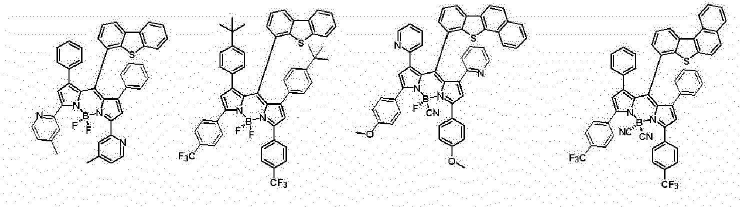

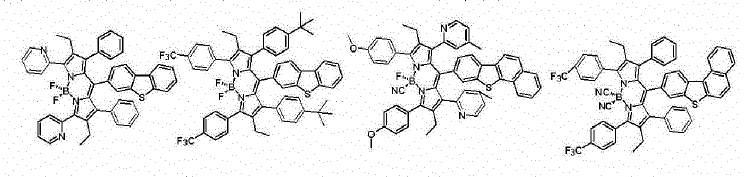

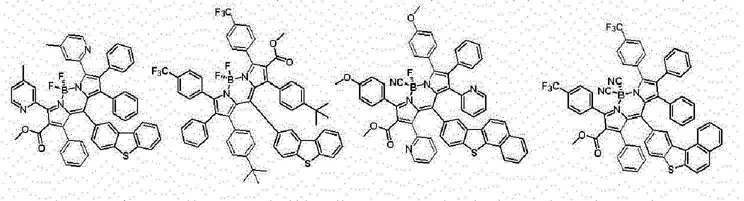

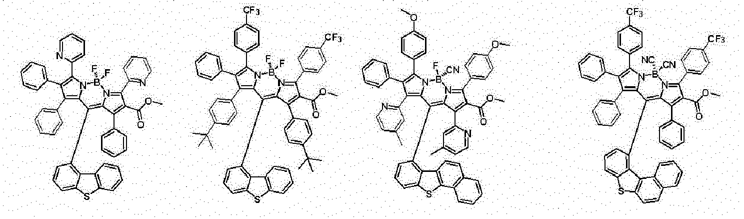

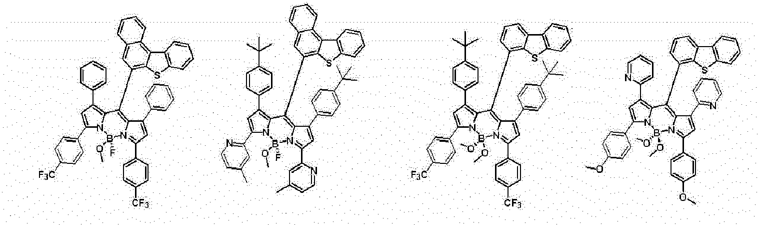

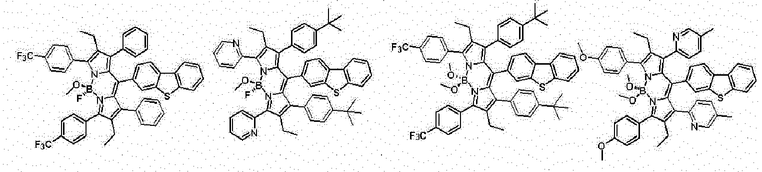

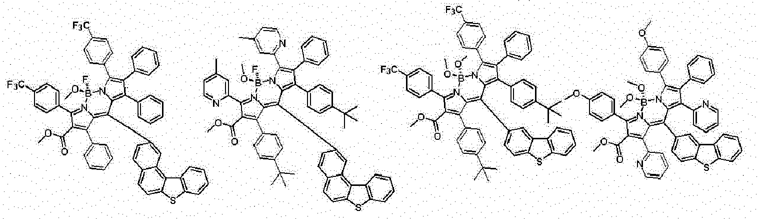

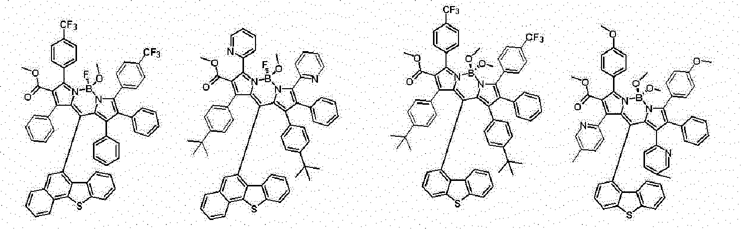

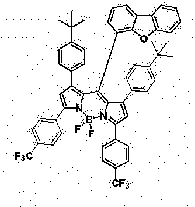

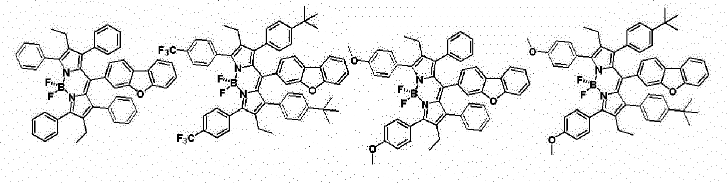

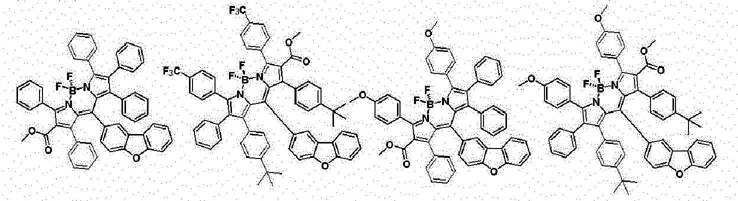

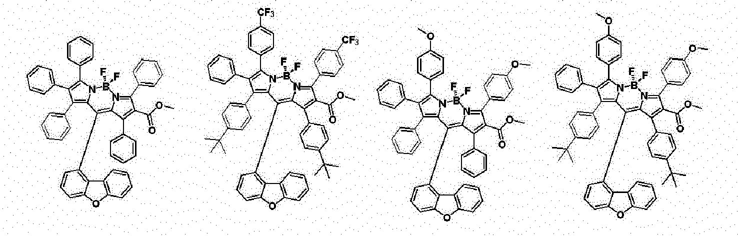

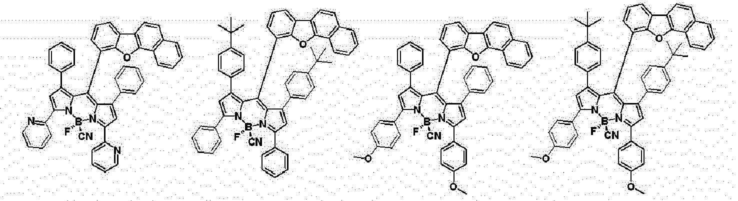

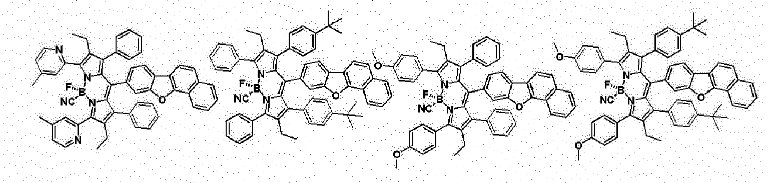

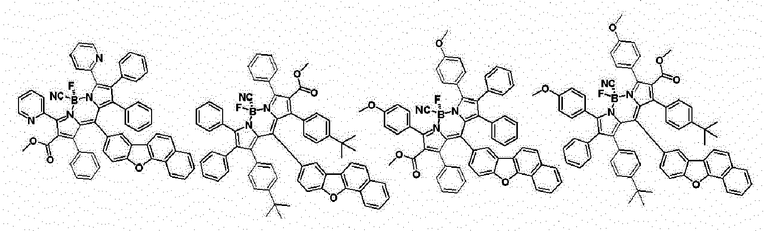

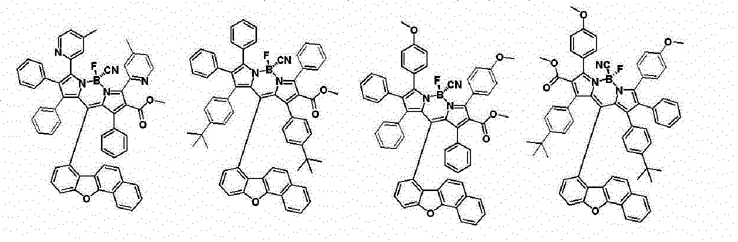

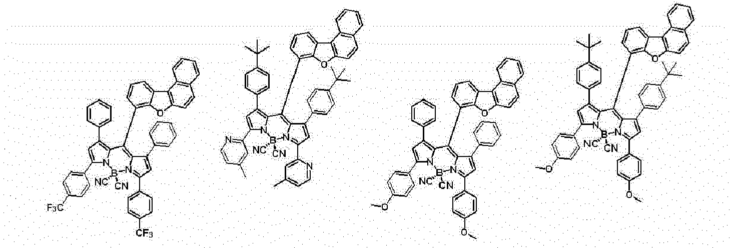

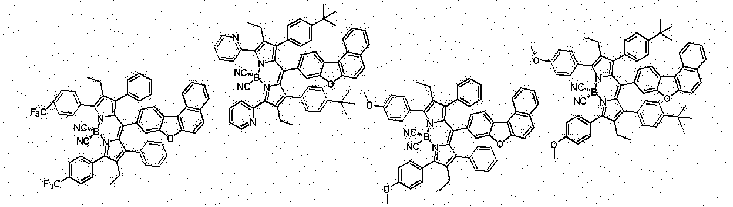

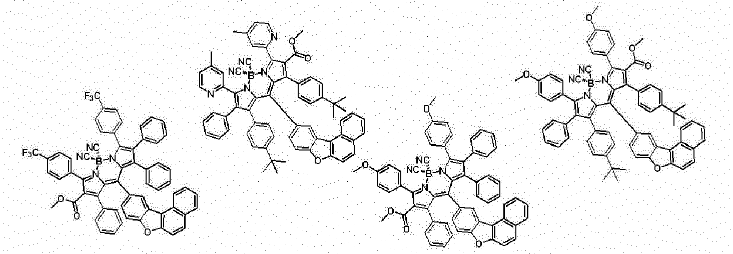

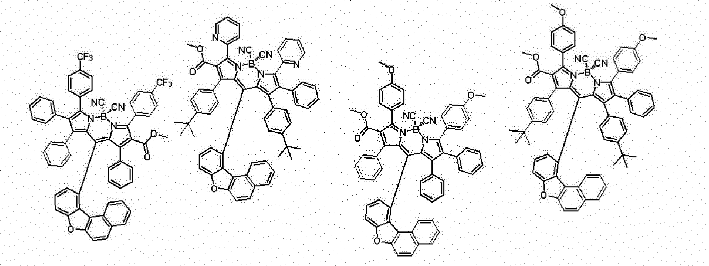

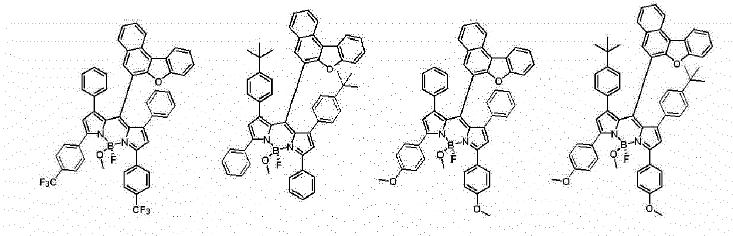

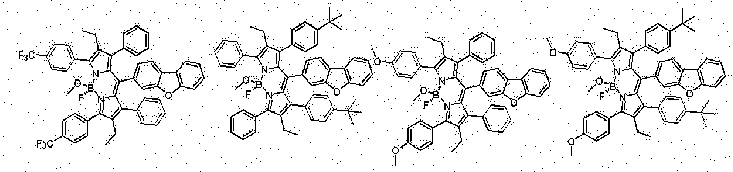

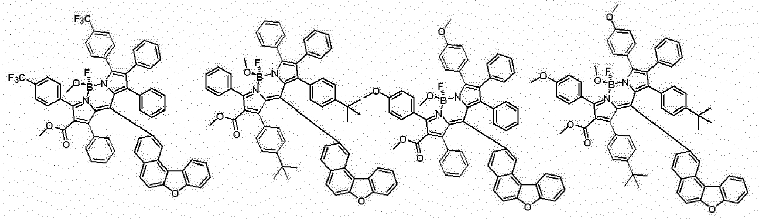

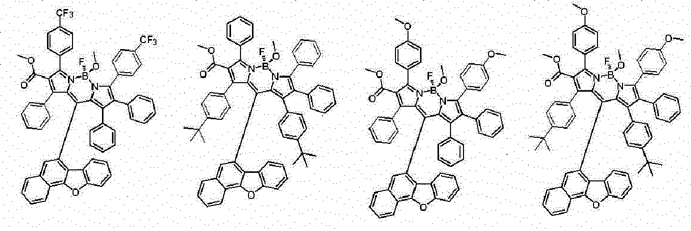

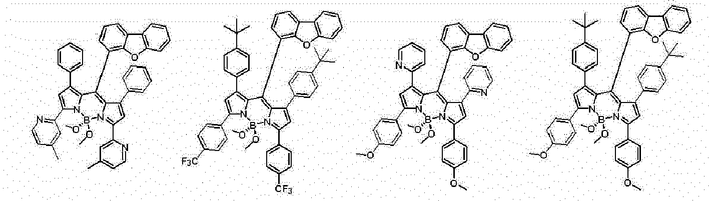

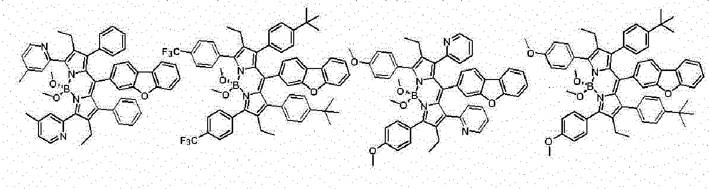

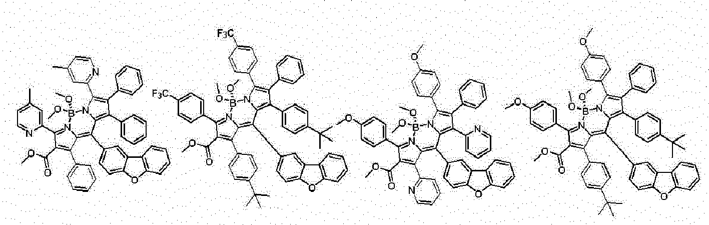

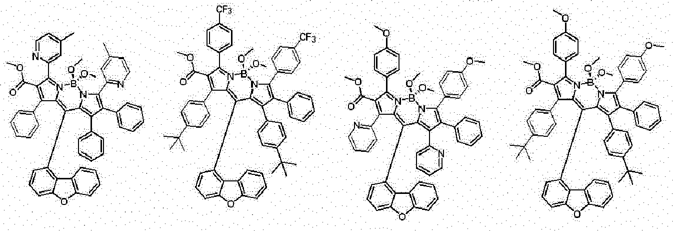

According to one embodiment of the present specification, Chemical Formula 1 is selected from among the following compounds.

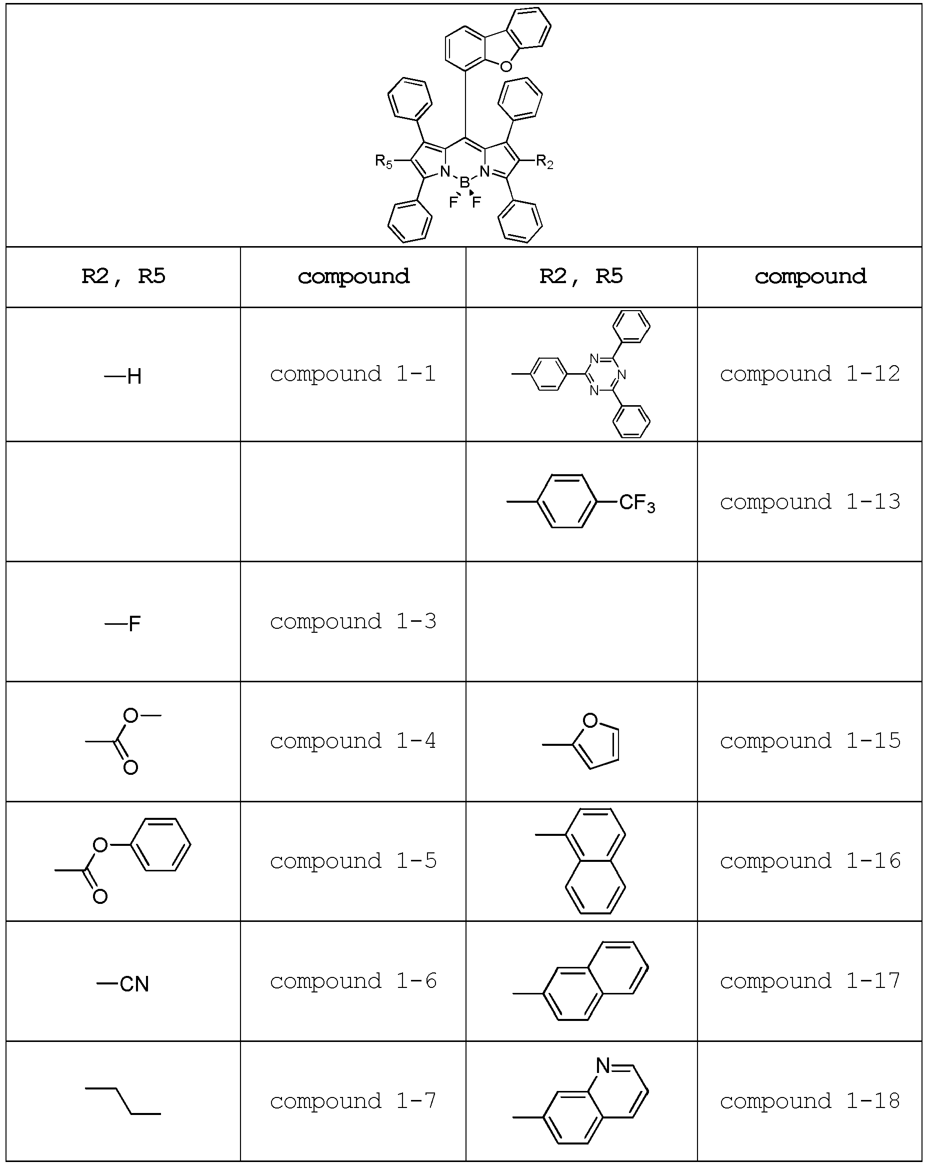

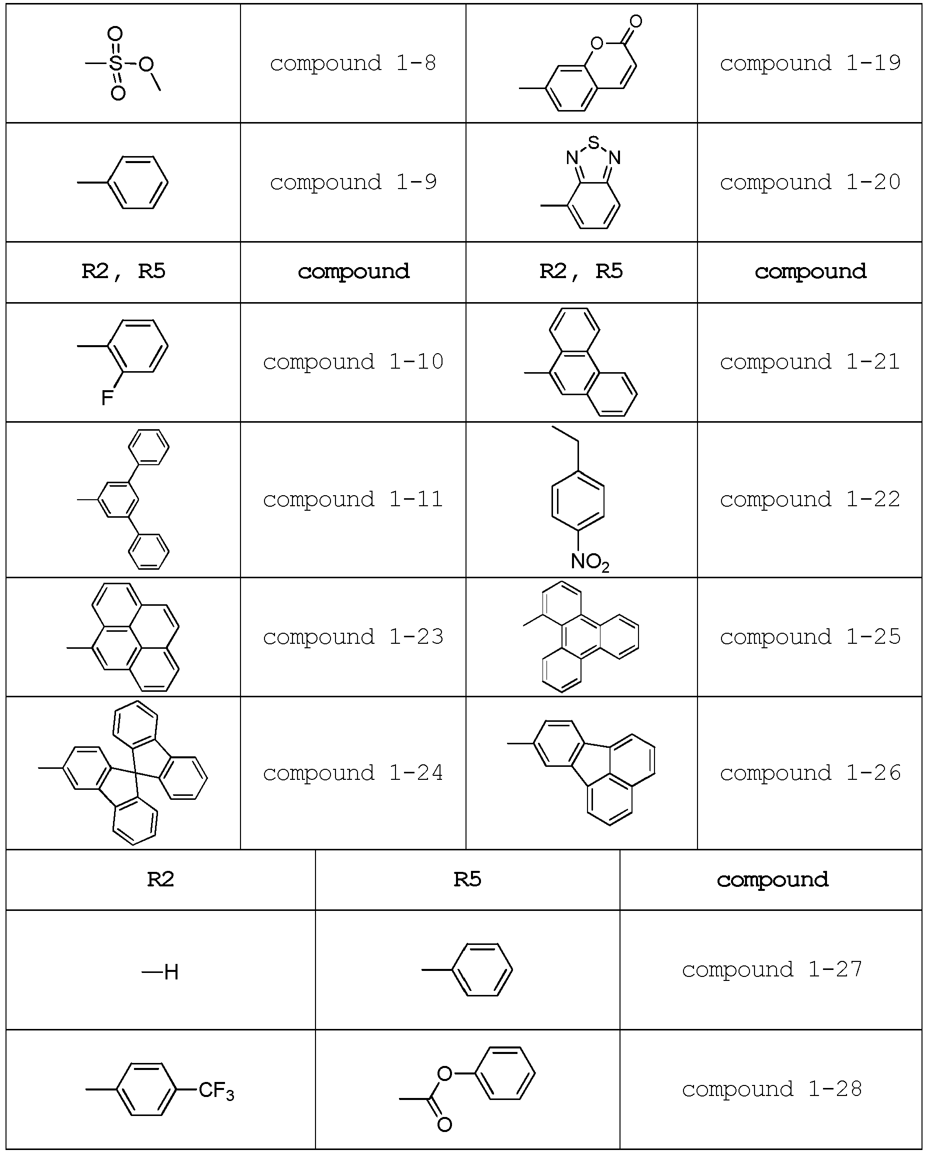

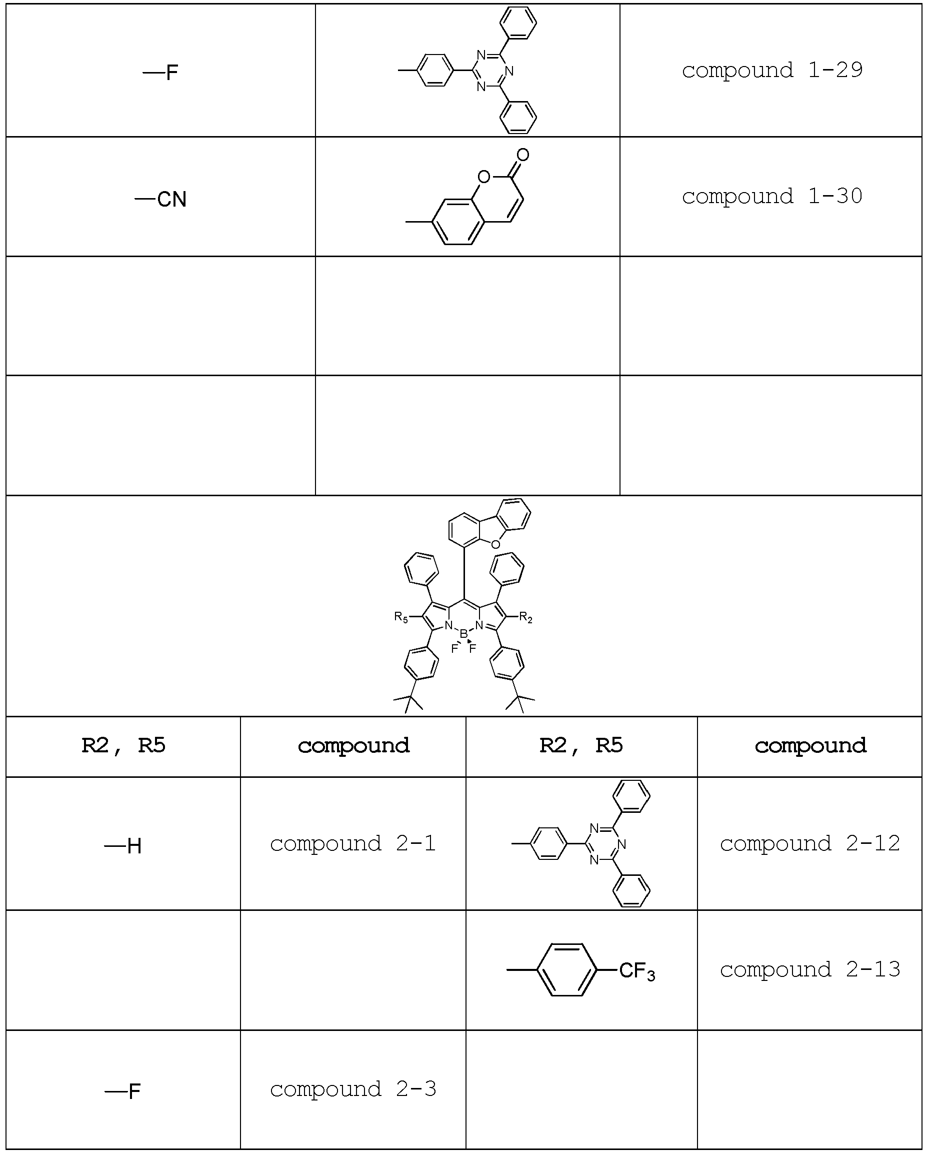

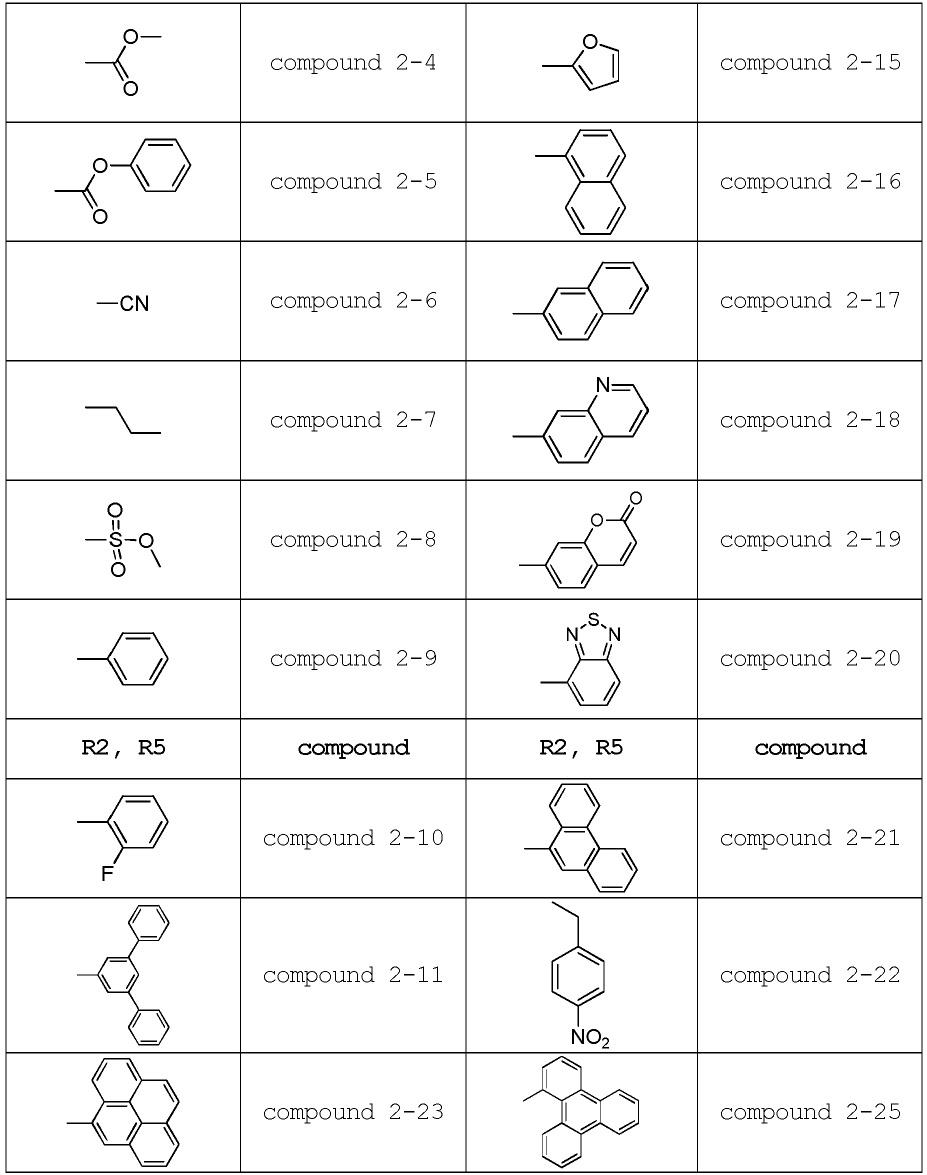

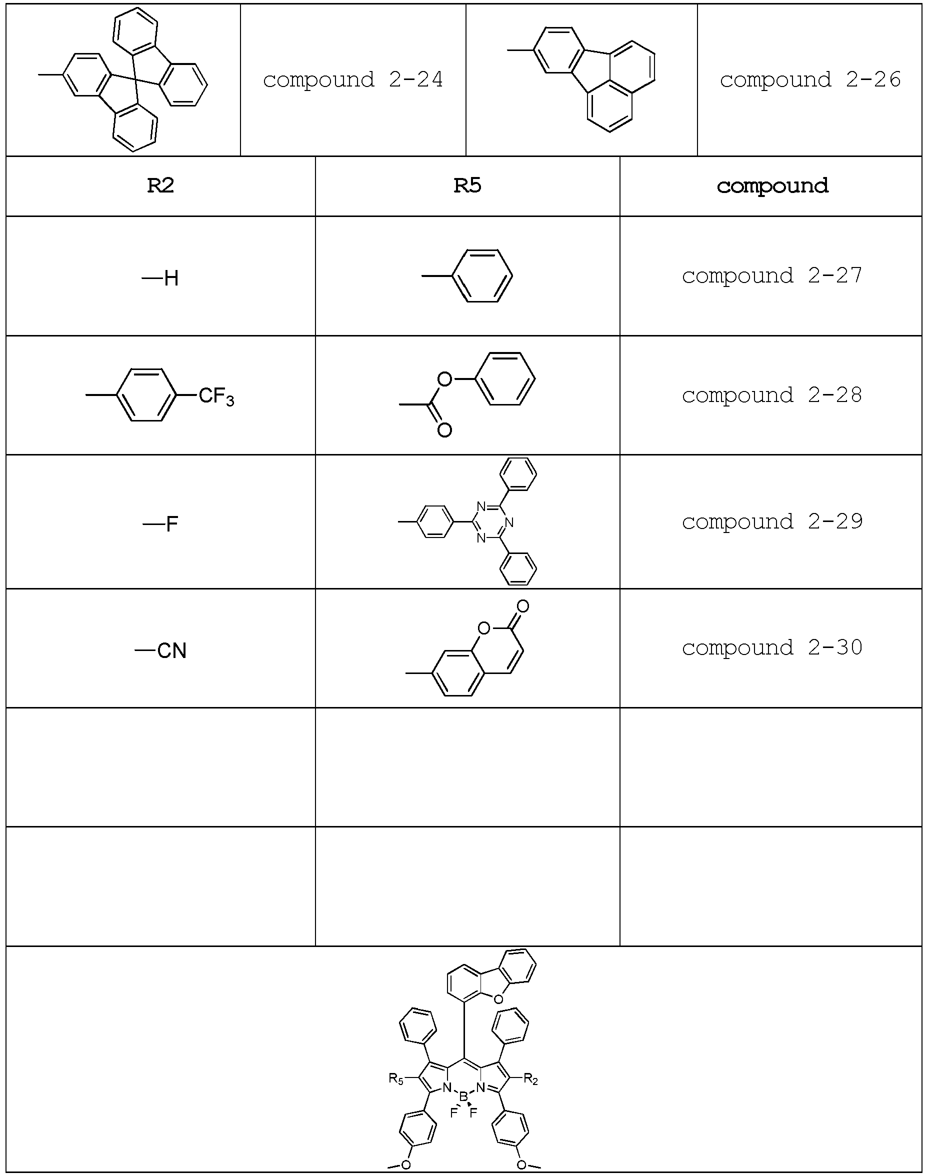

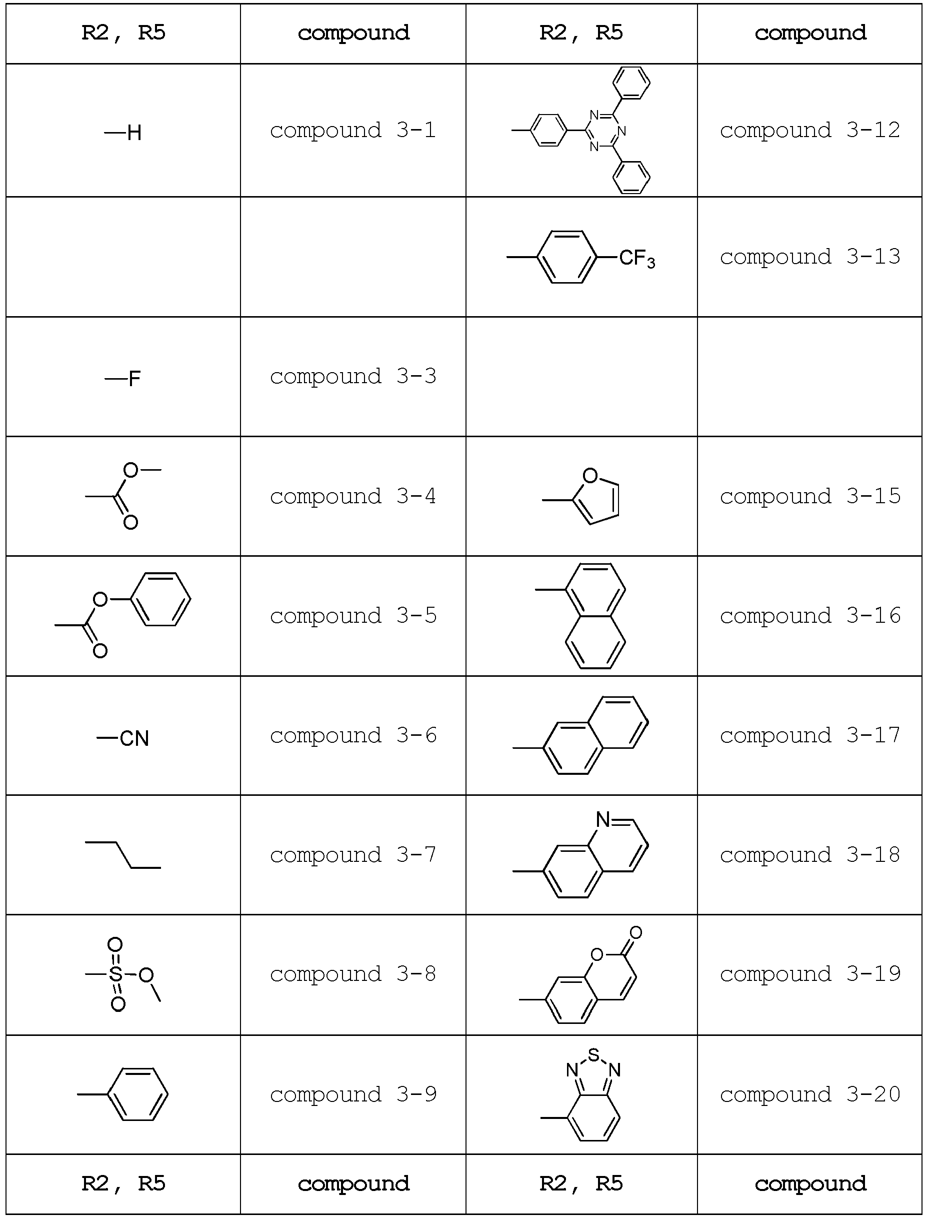

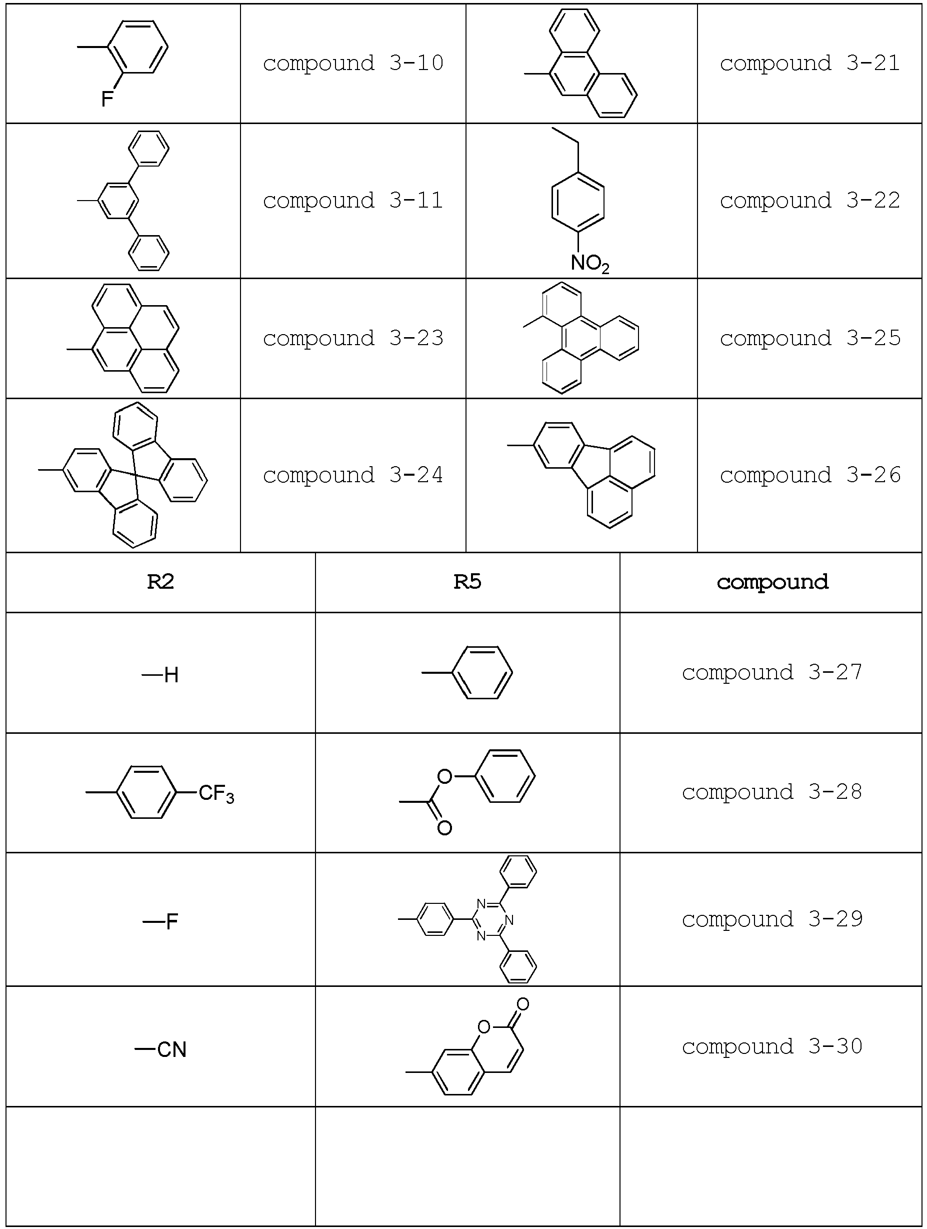

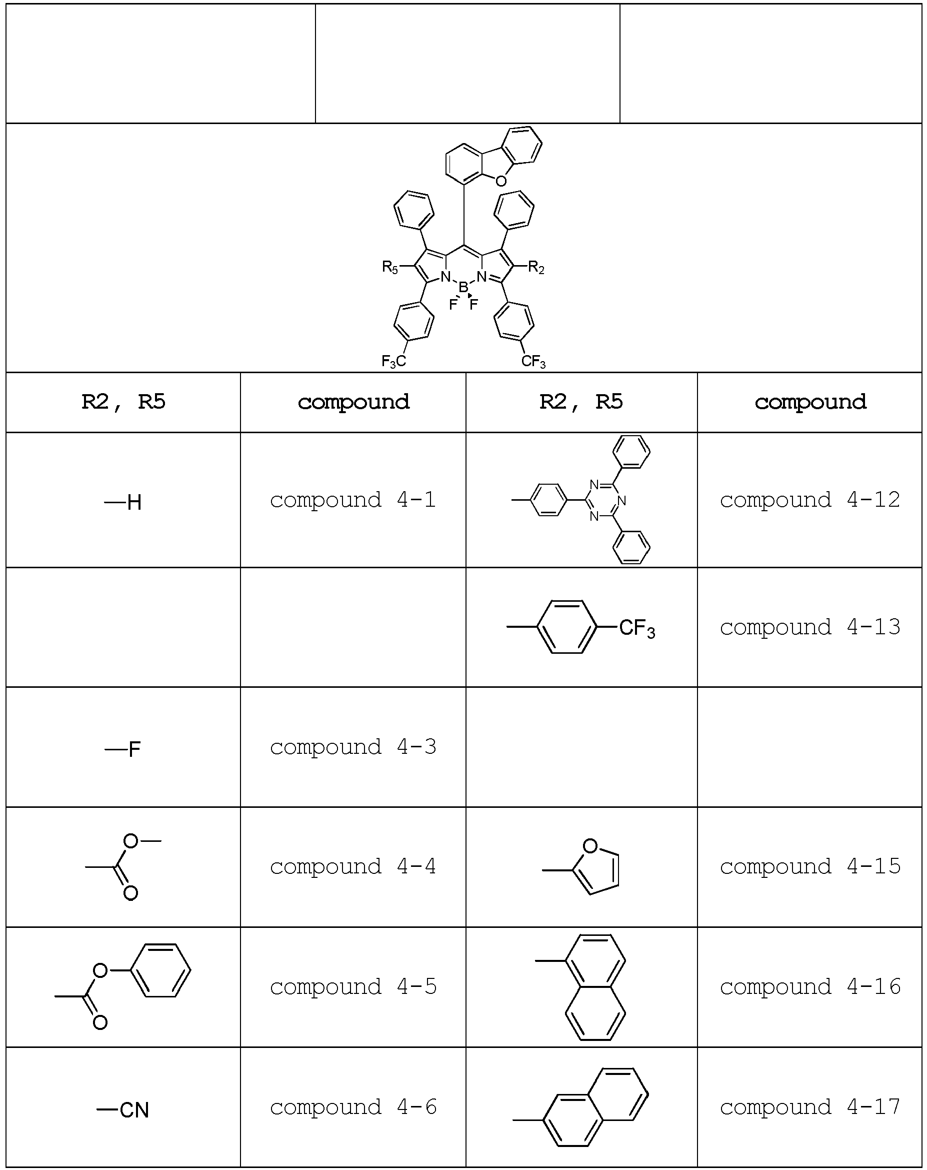

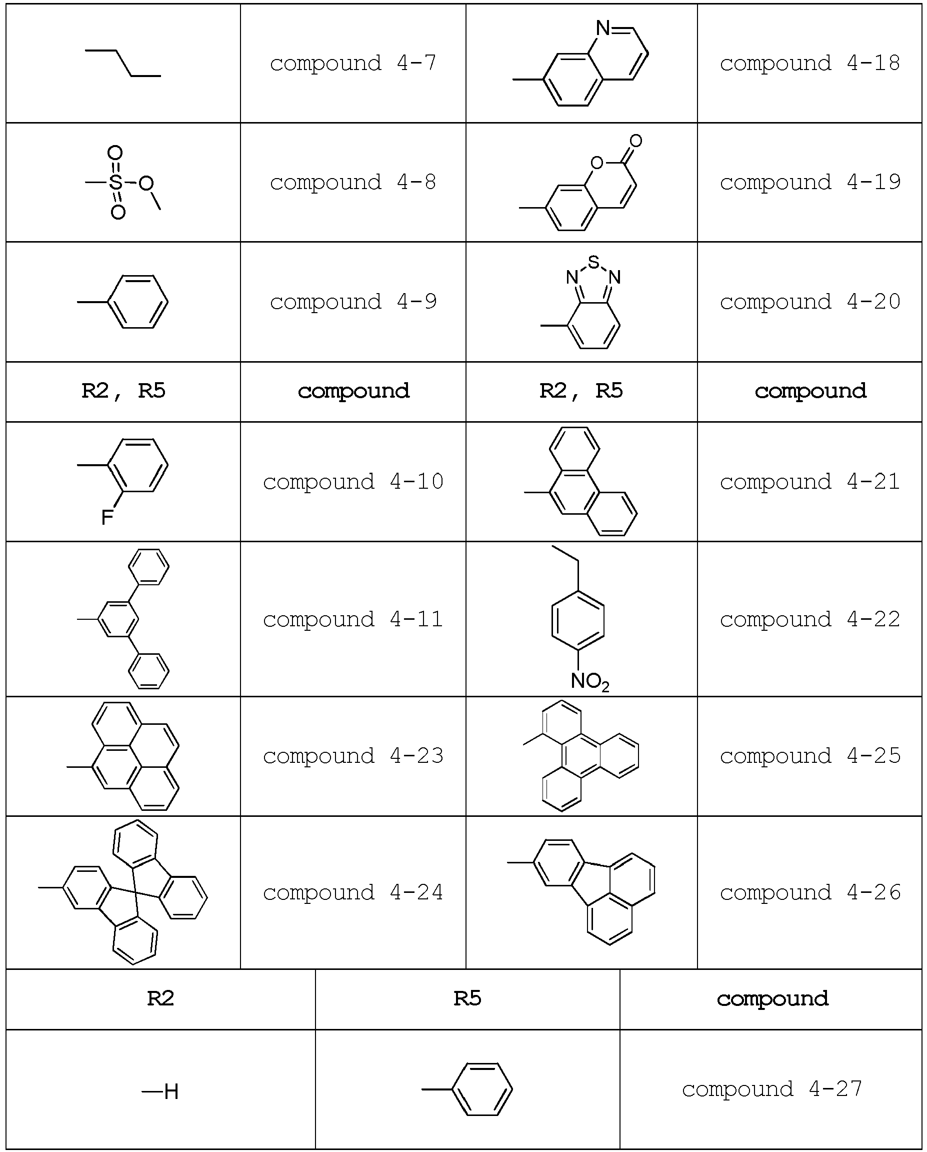

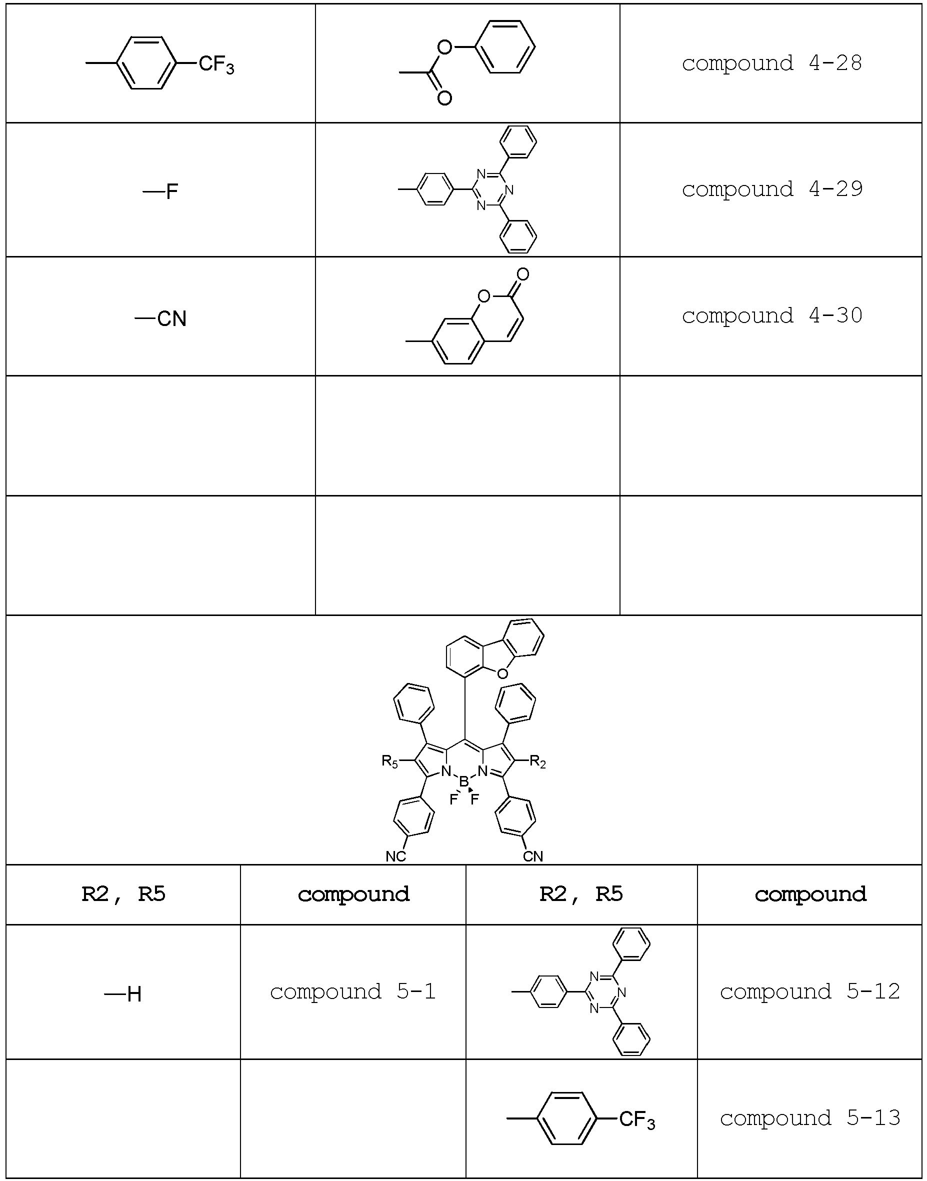

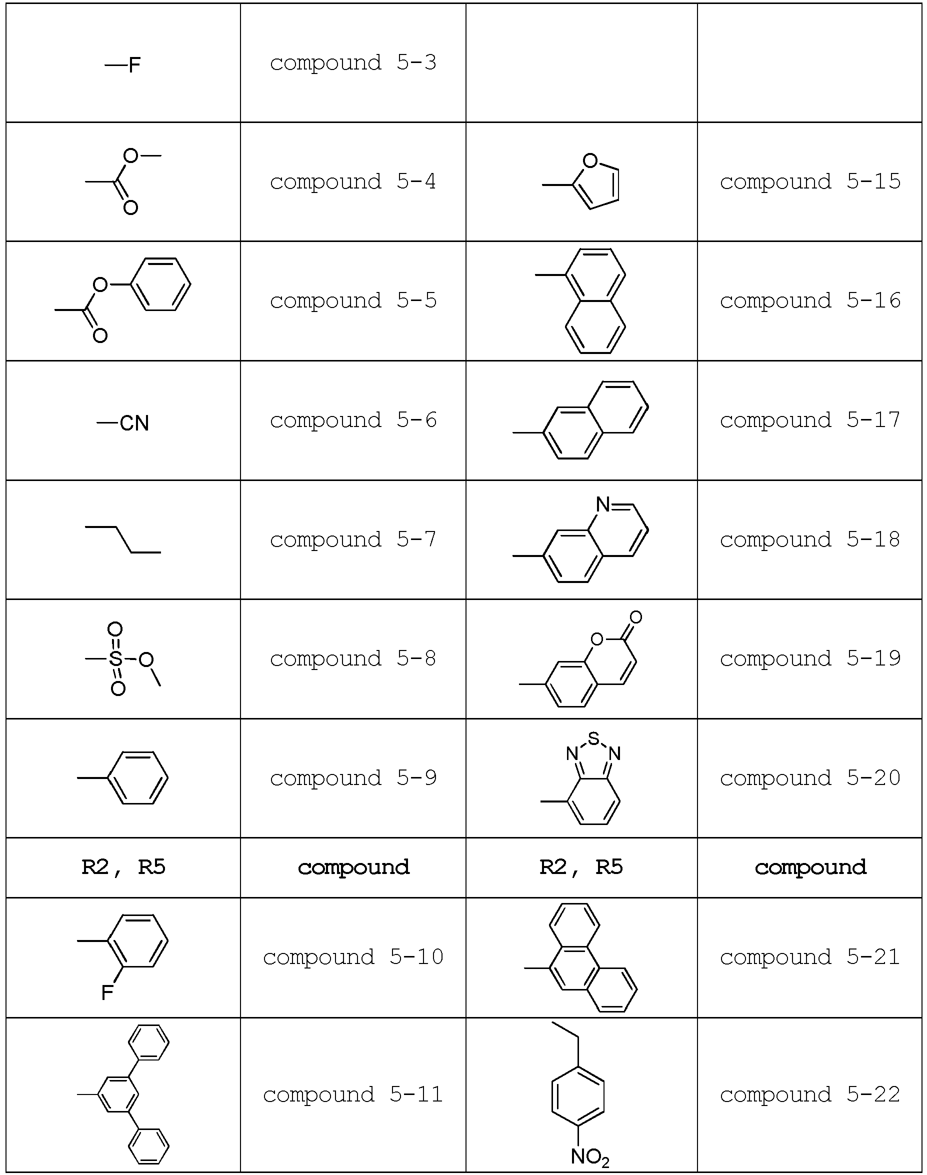

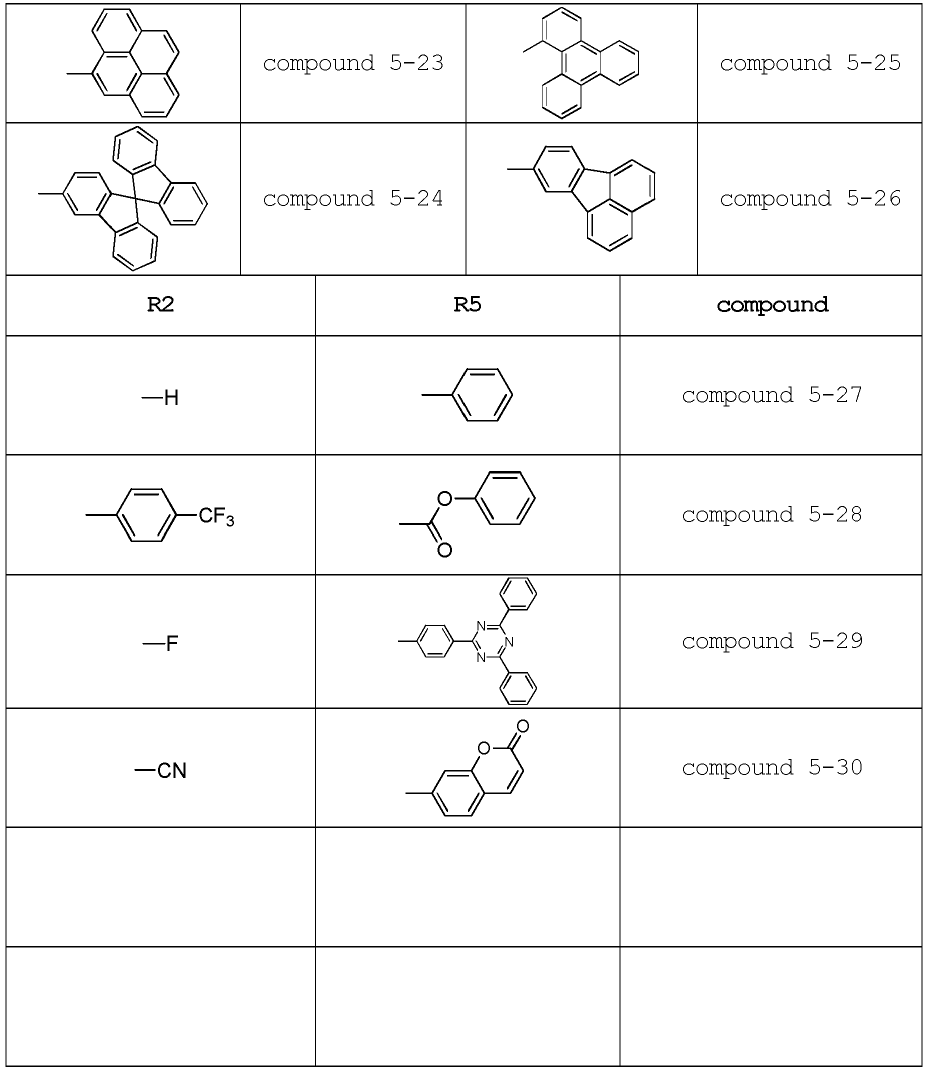

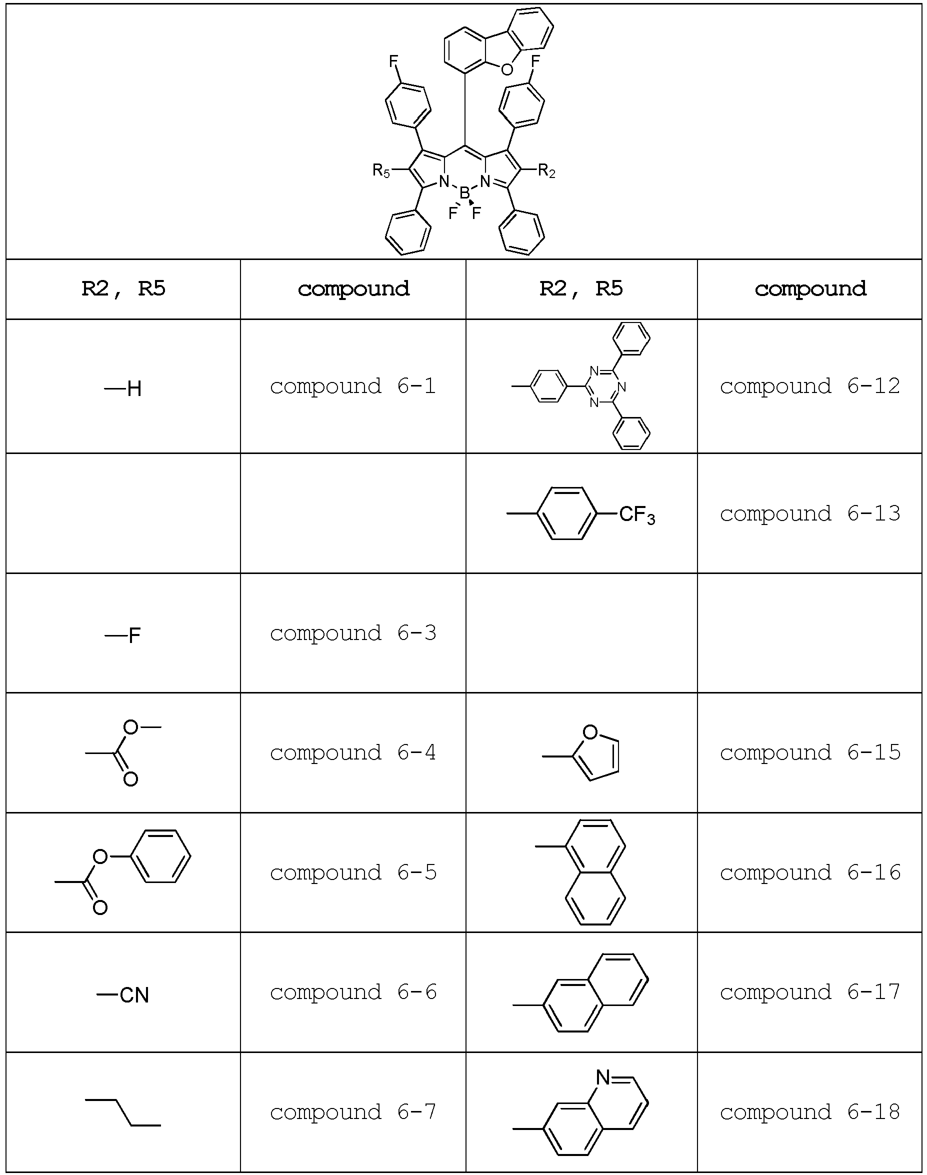

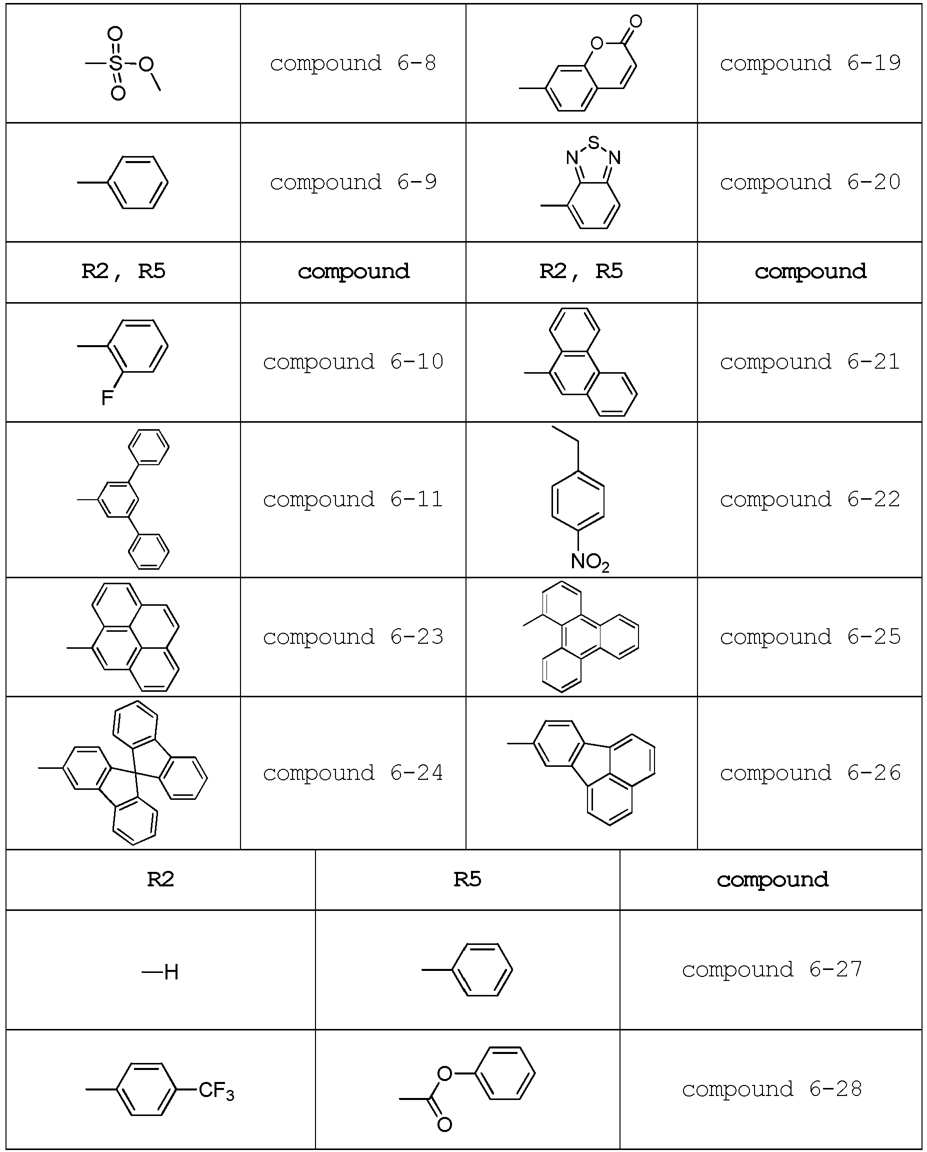

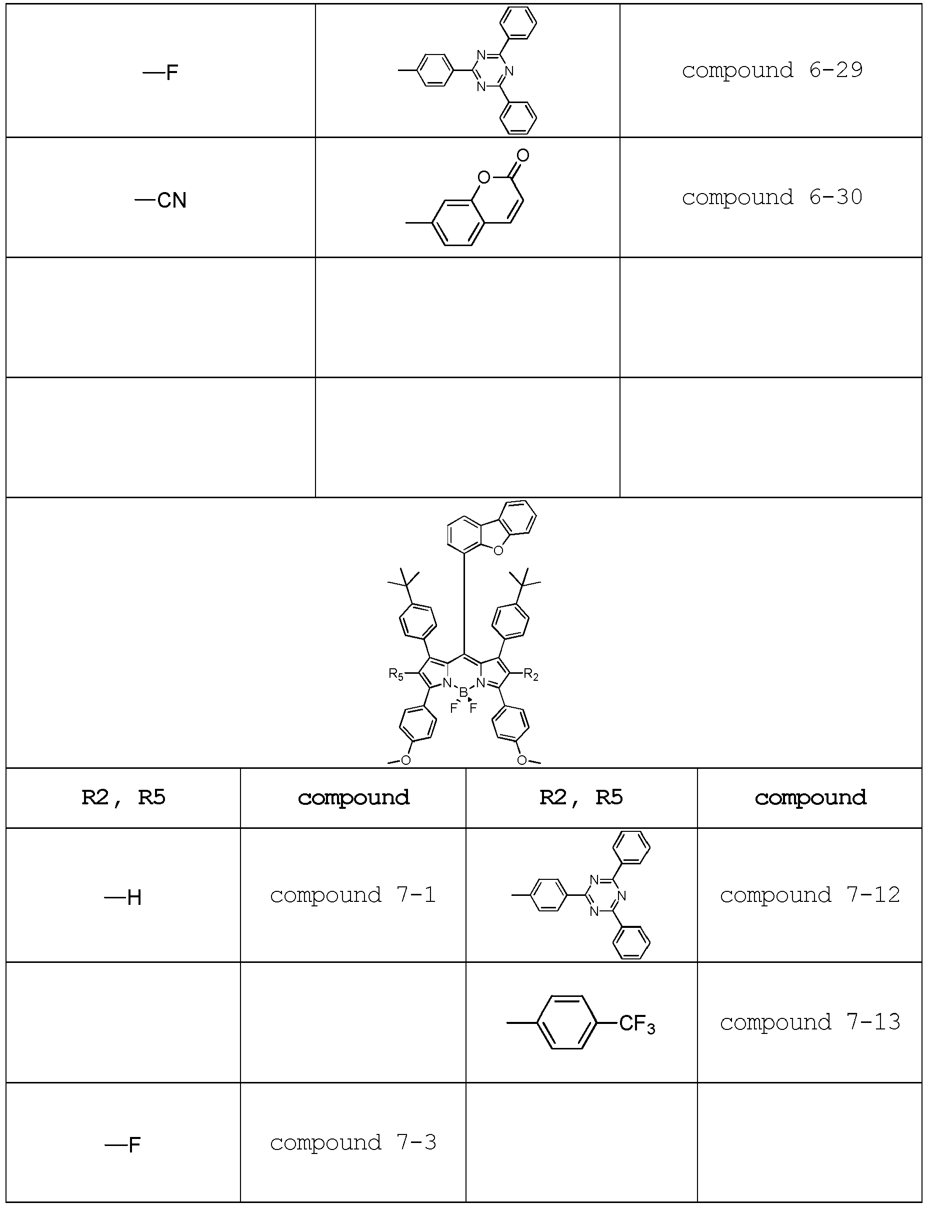

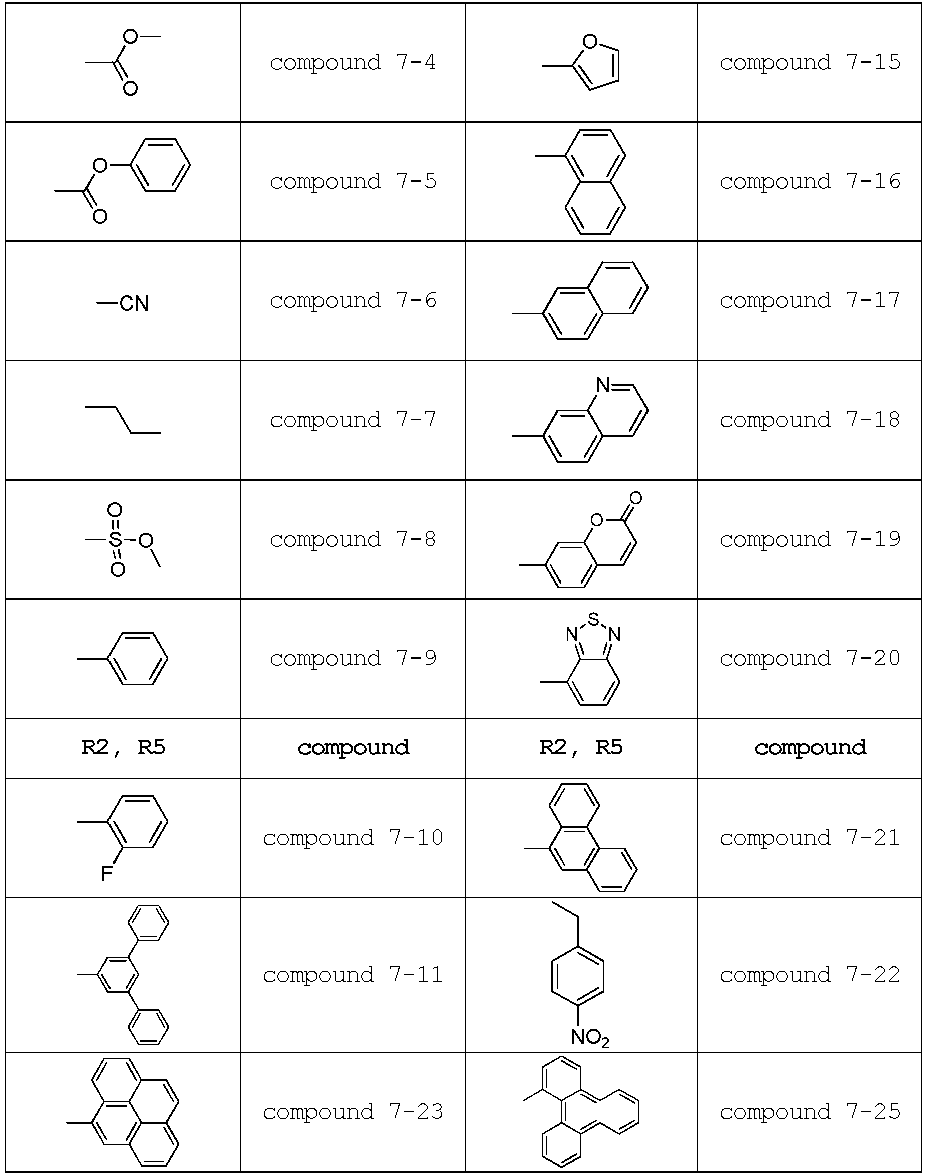

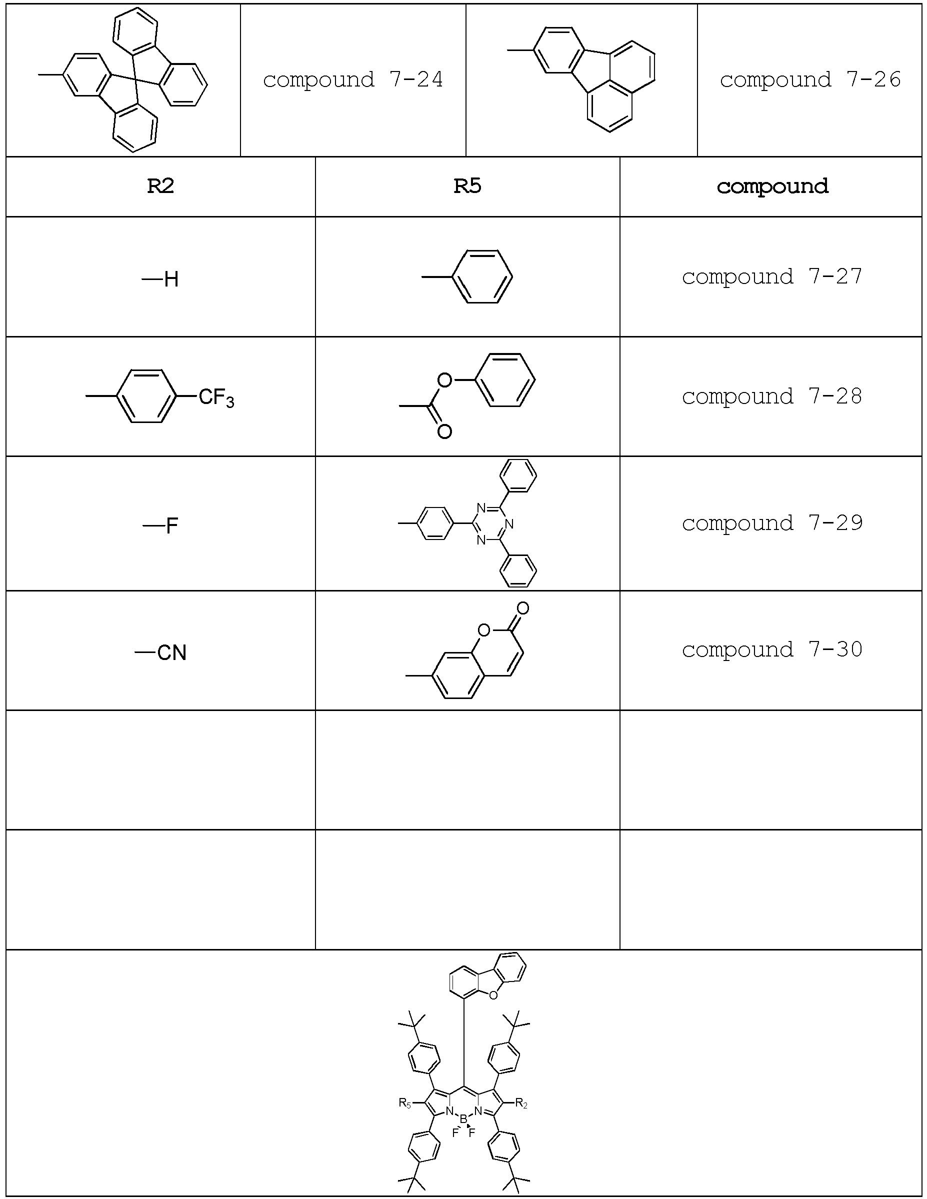

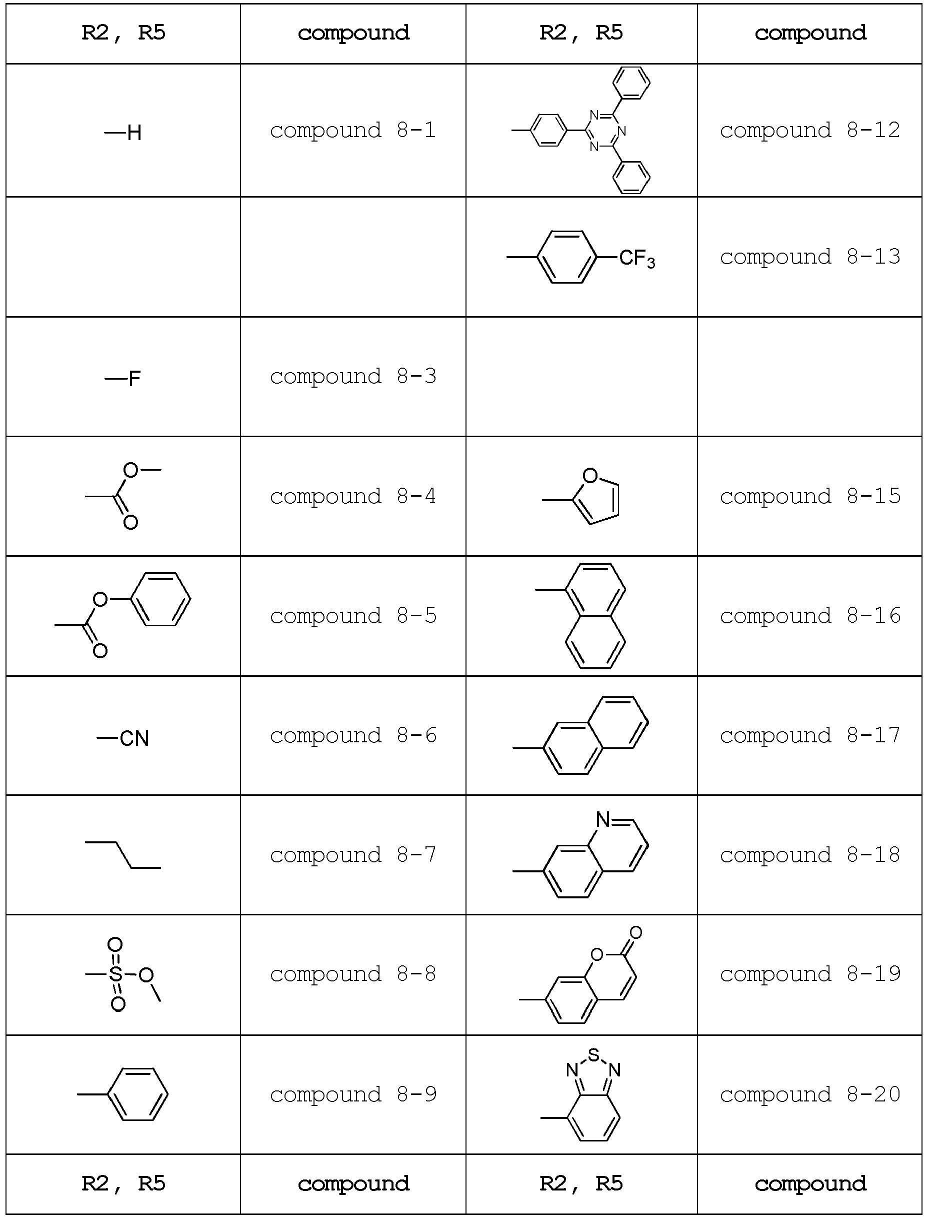

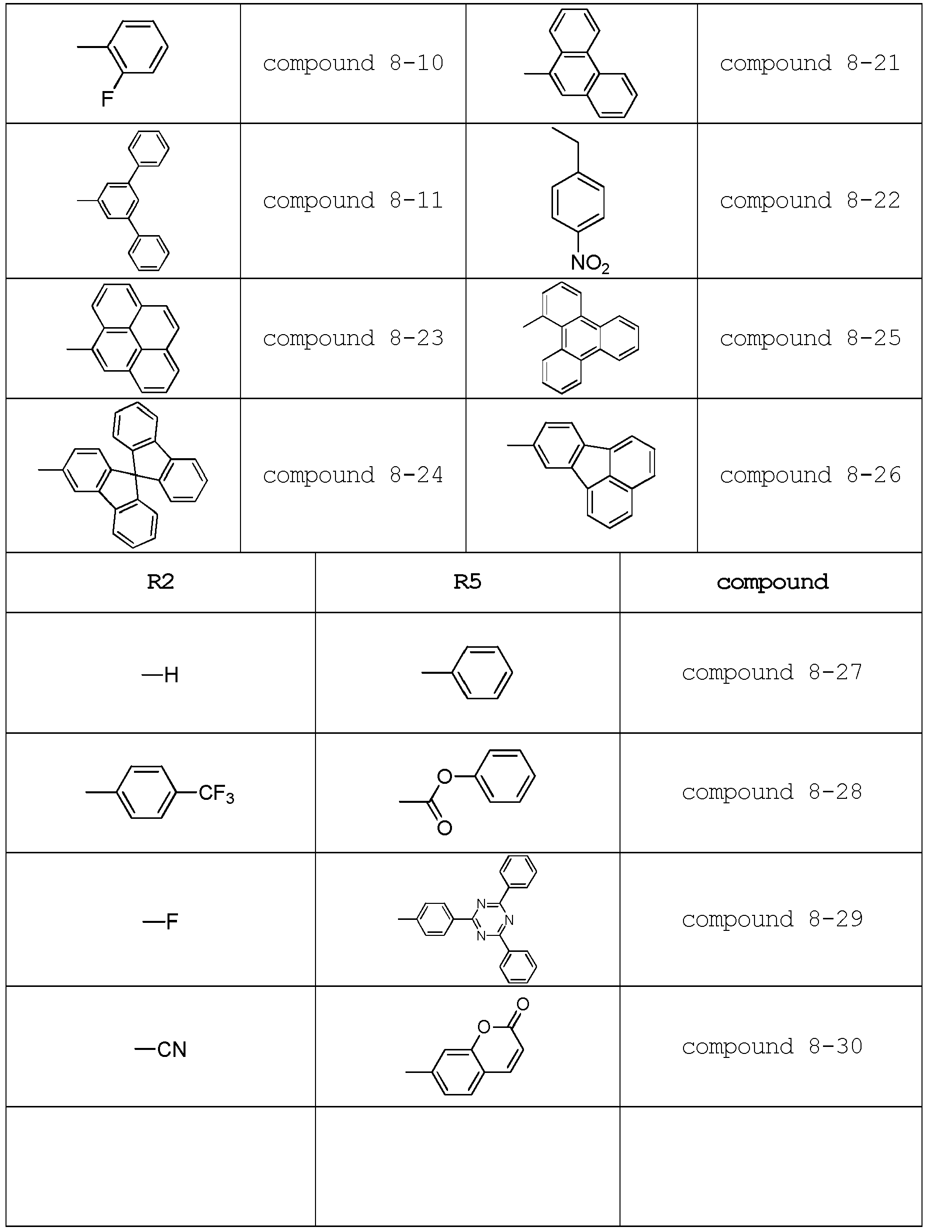

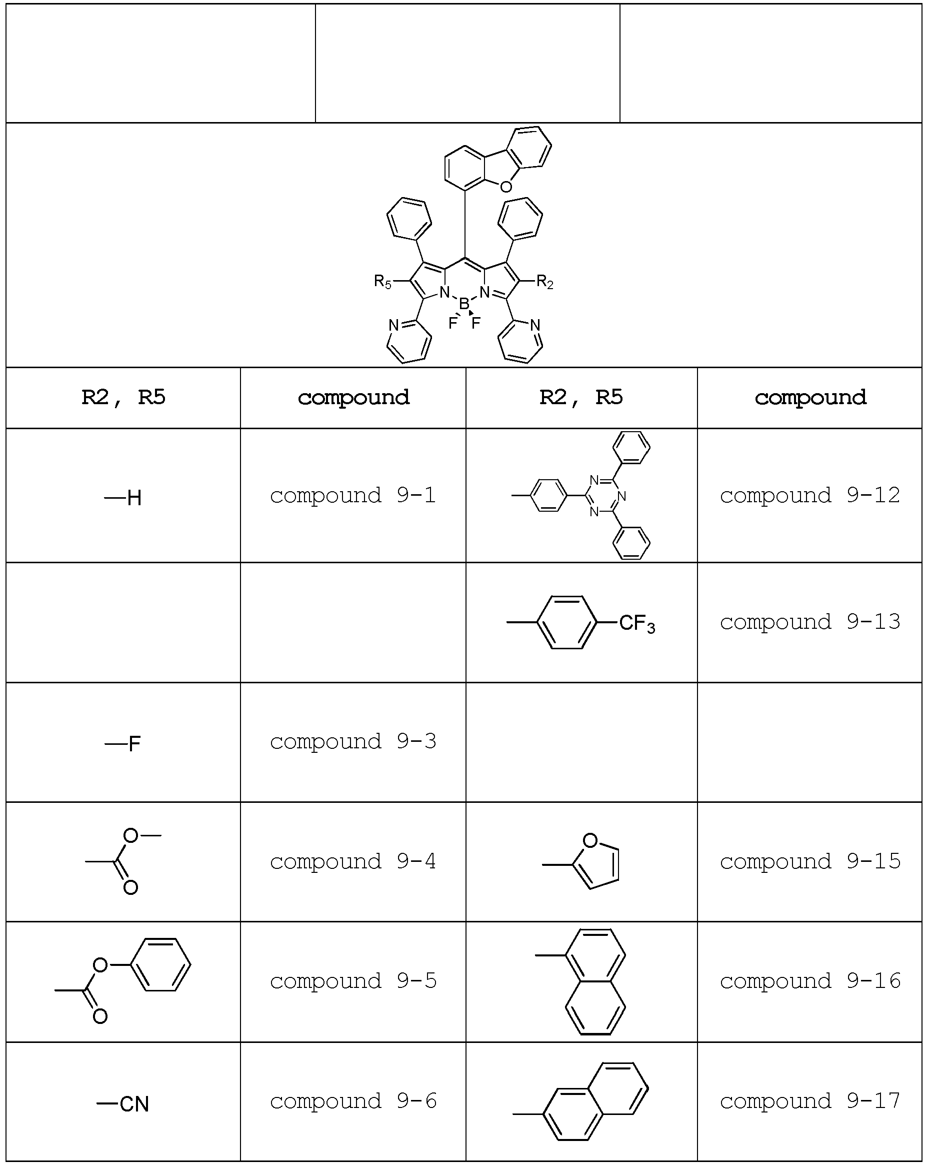

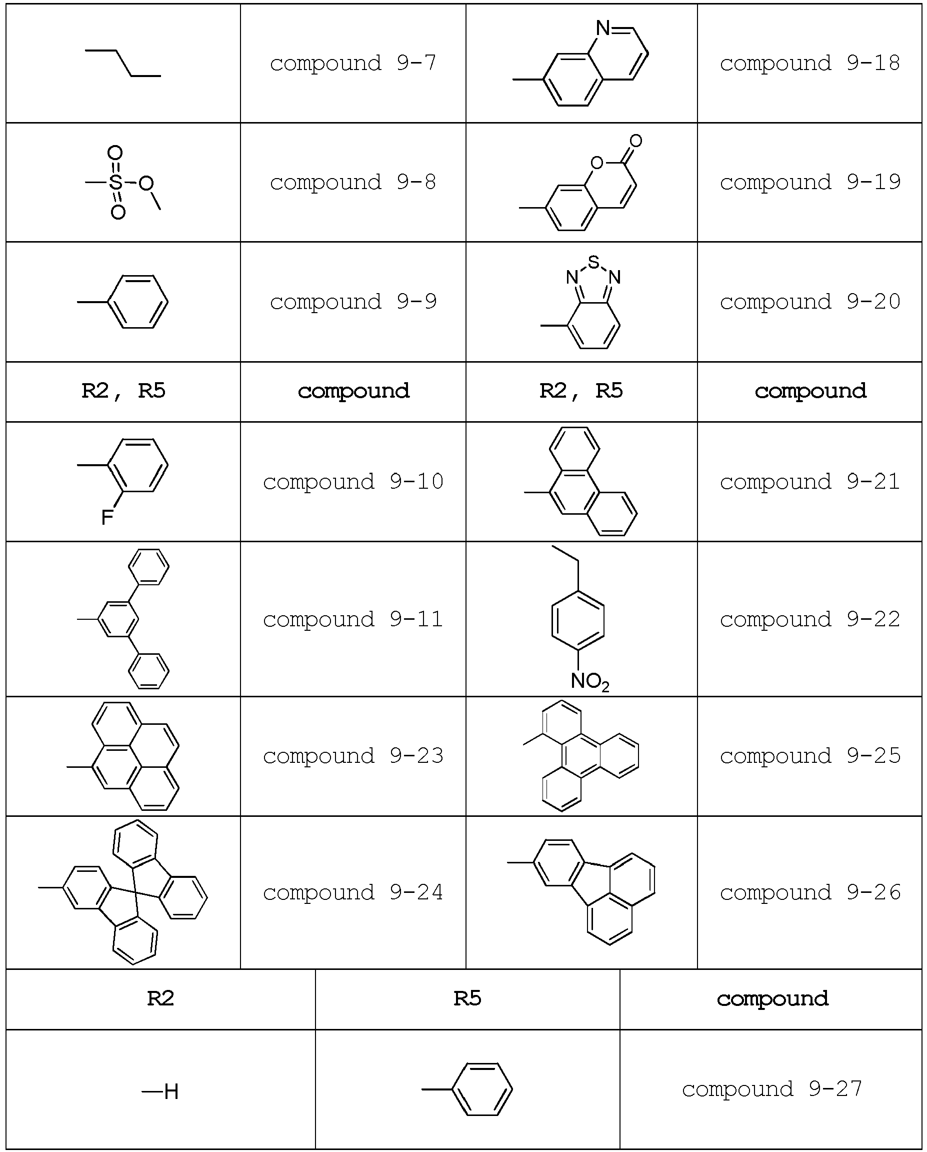

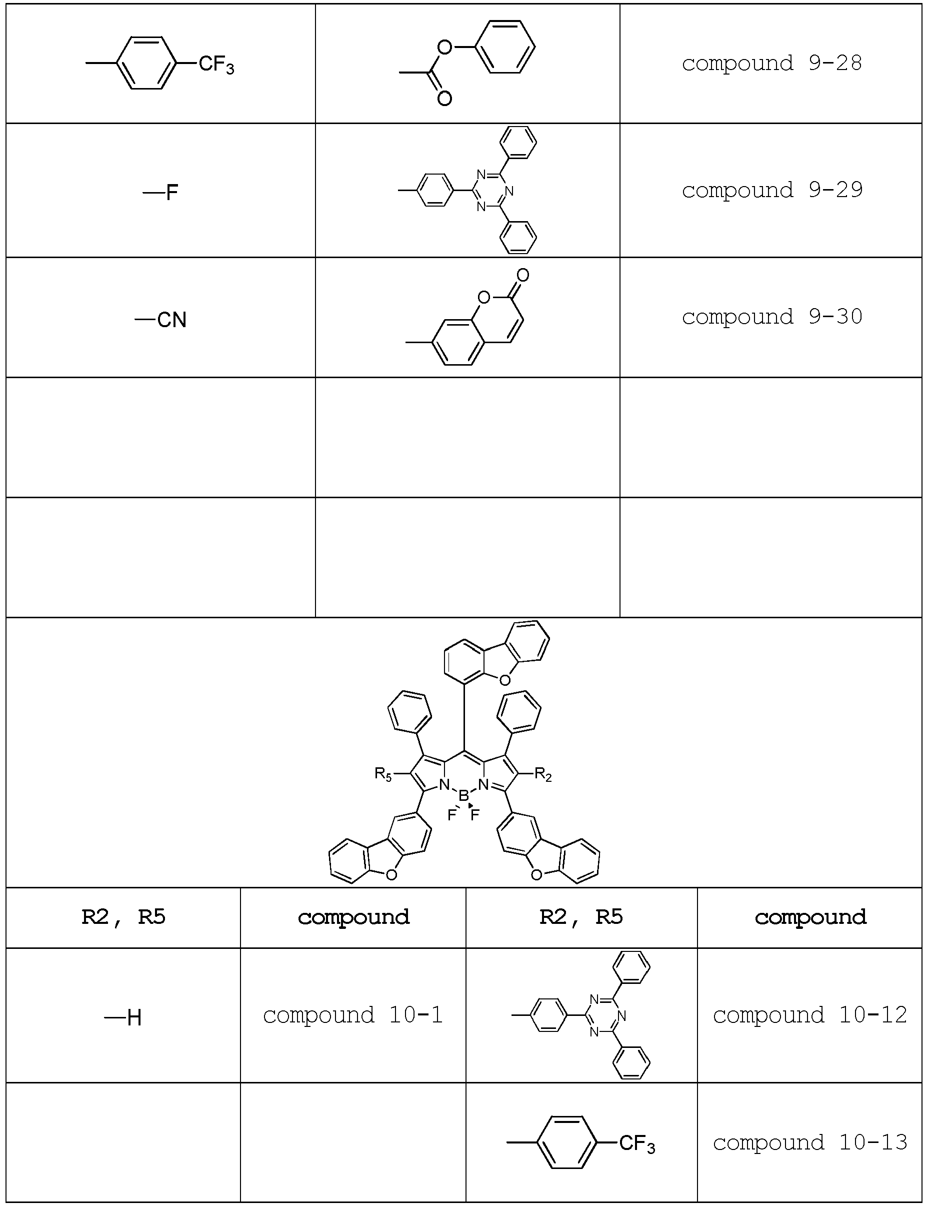

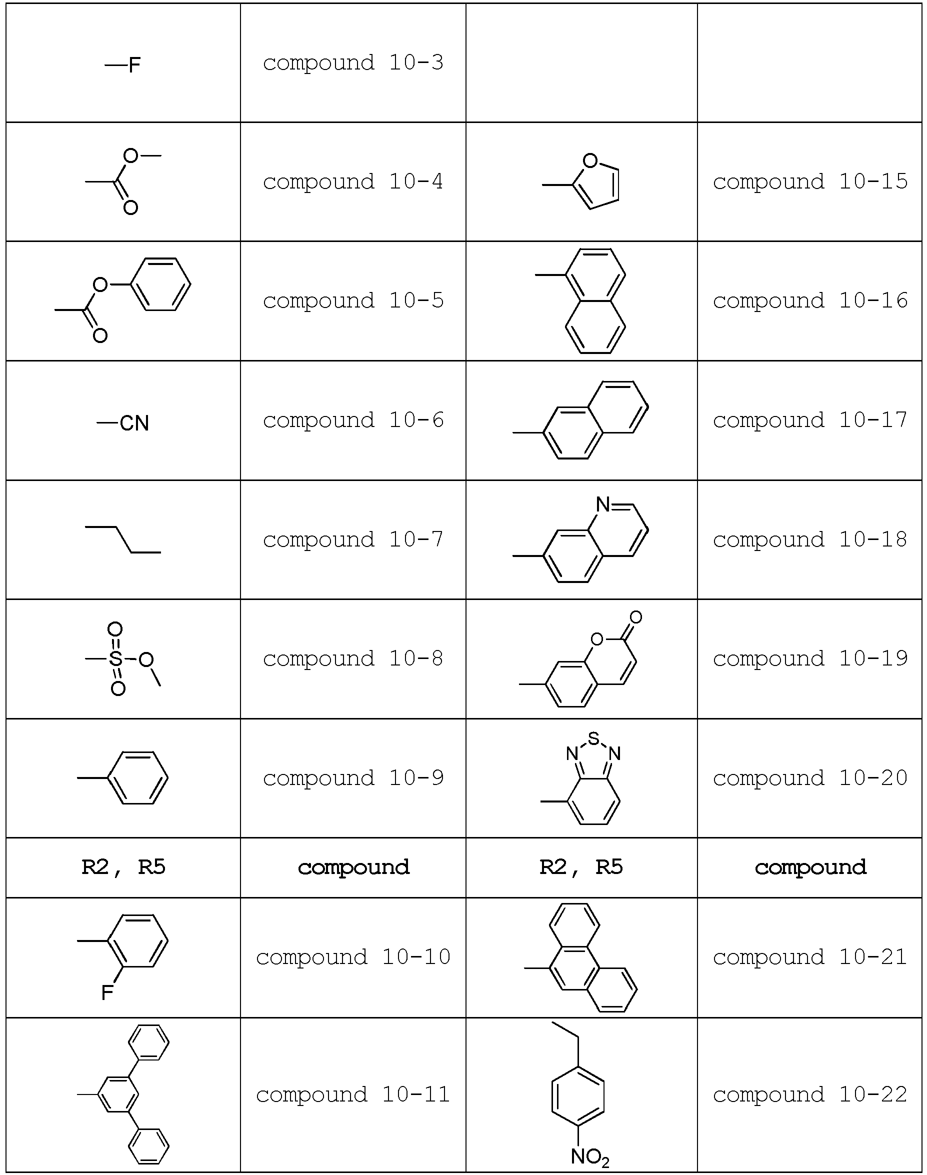

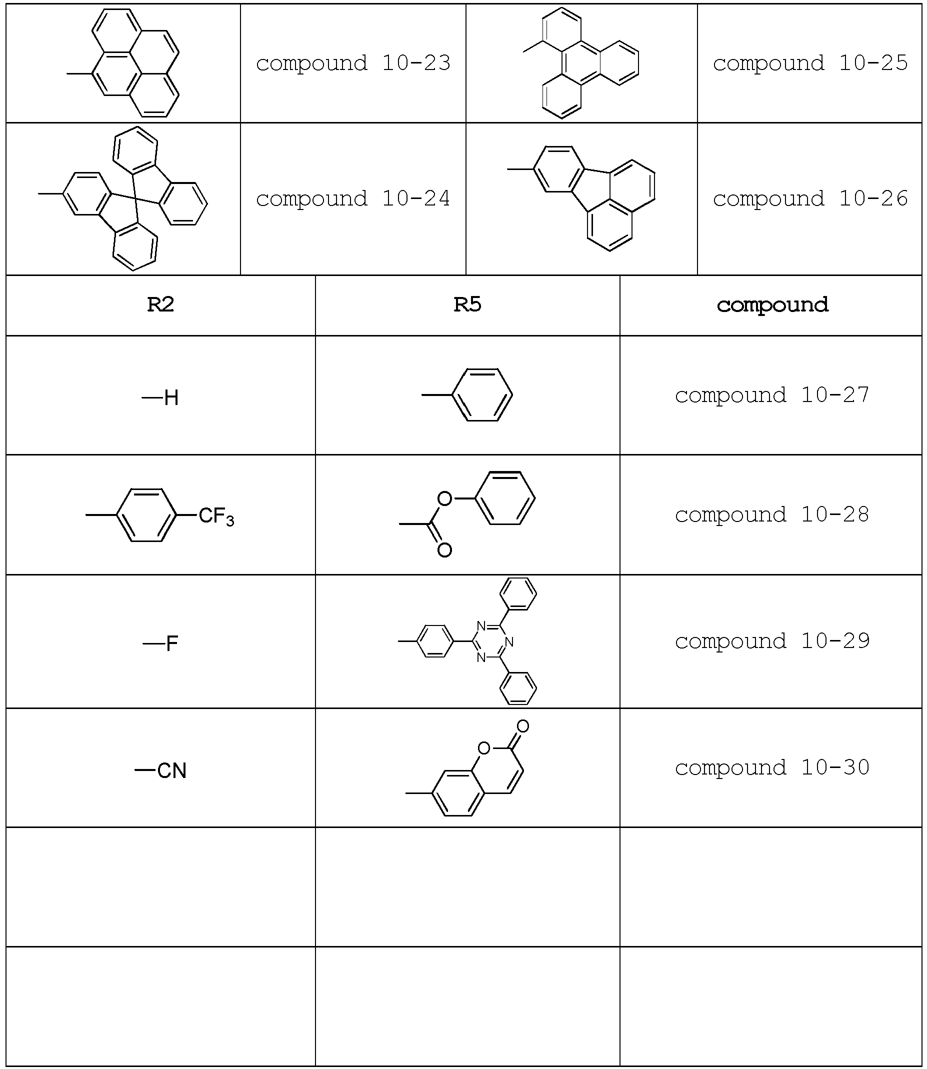

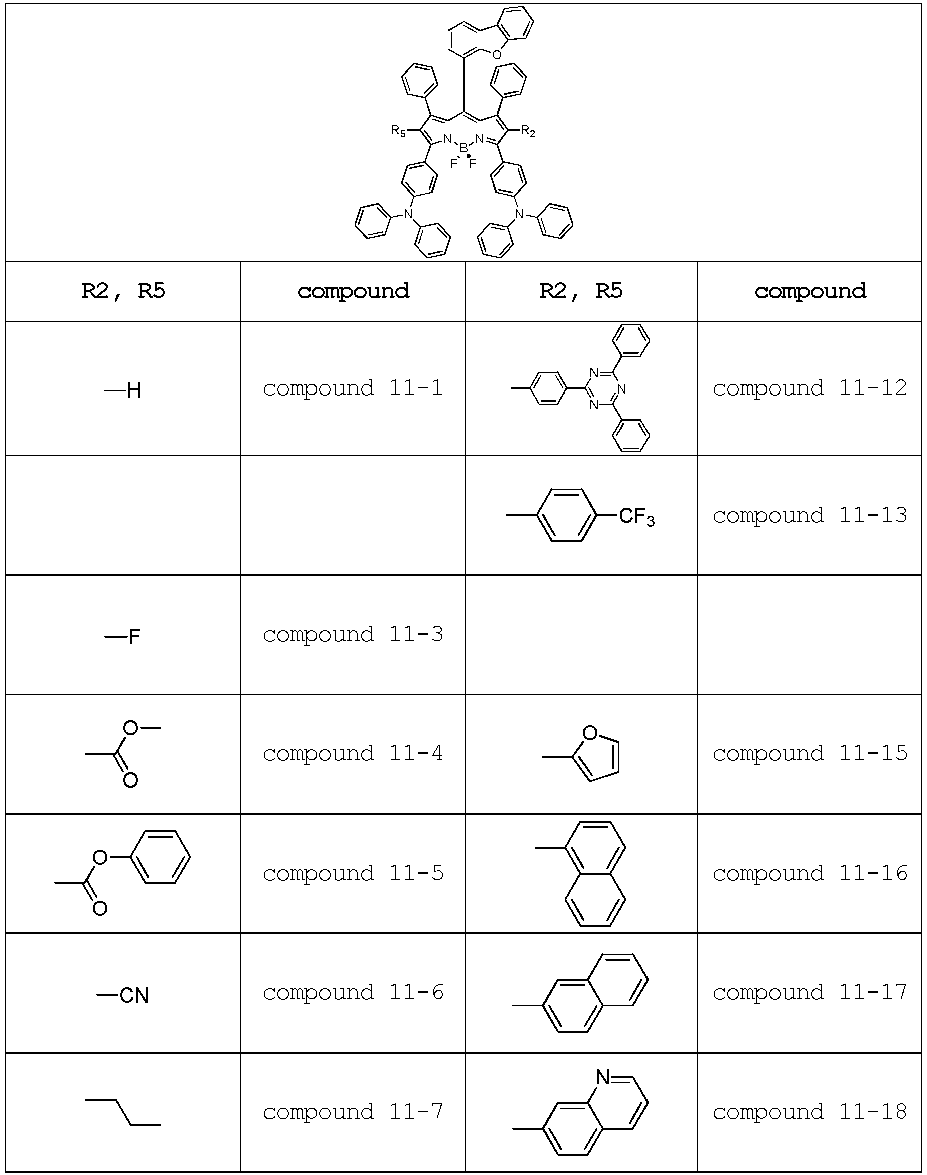

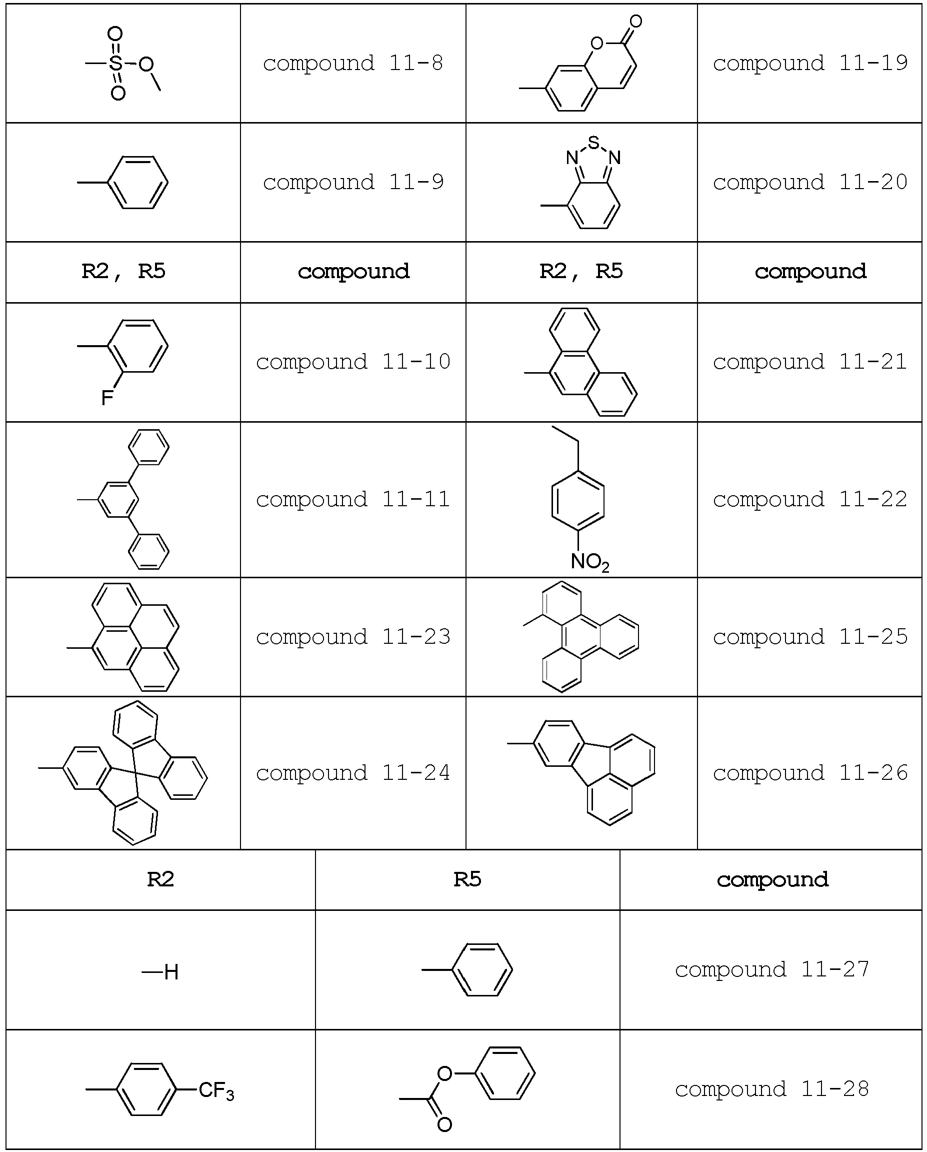

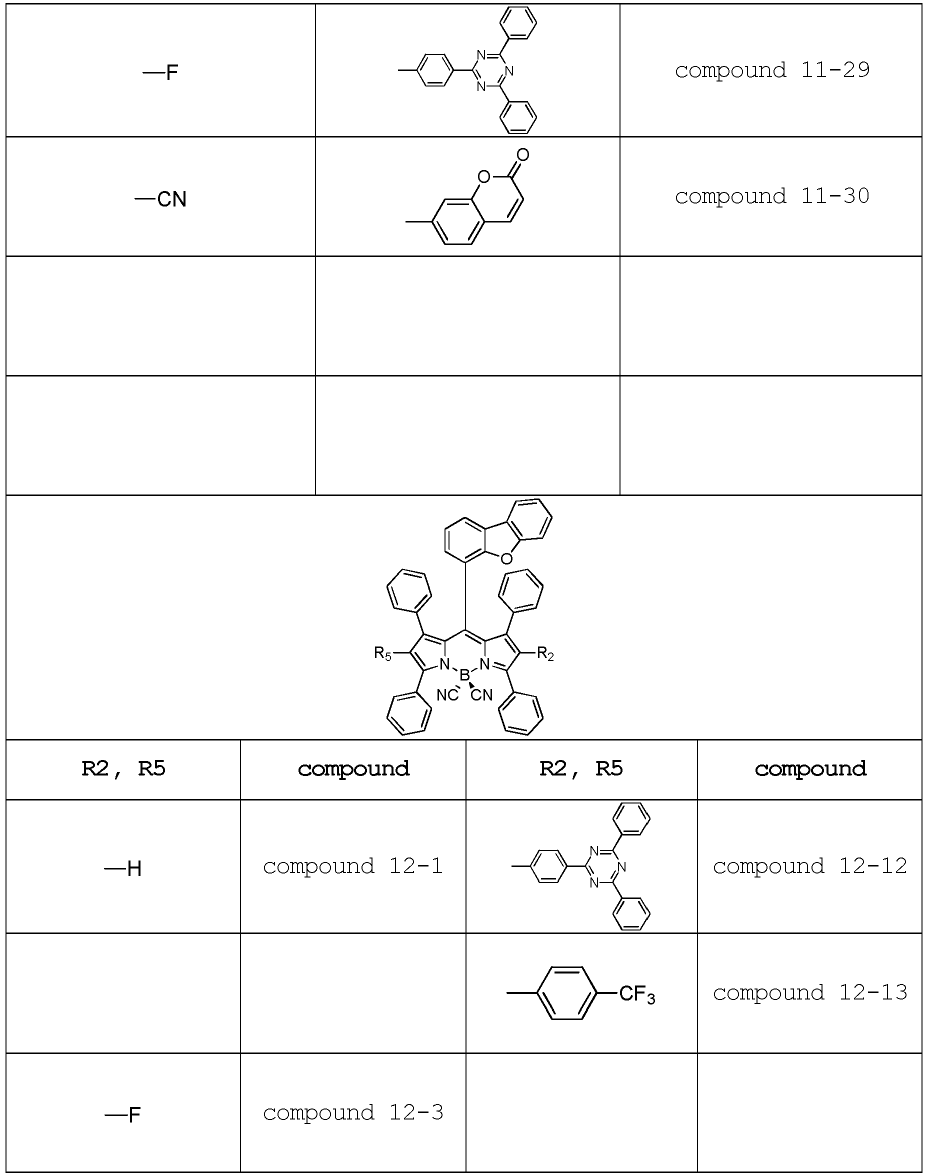

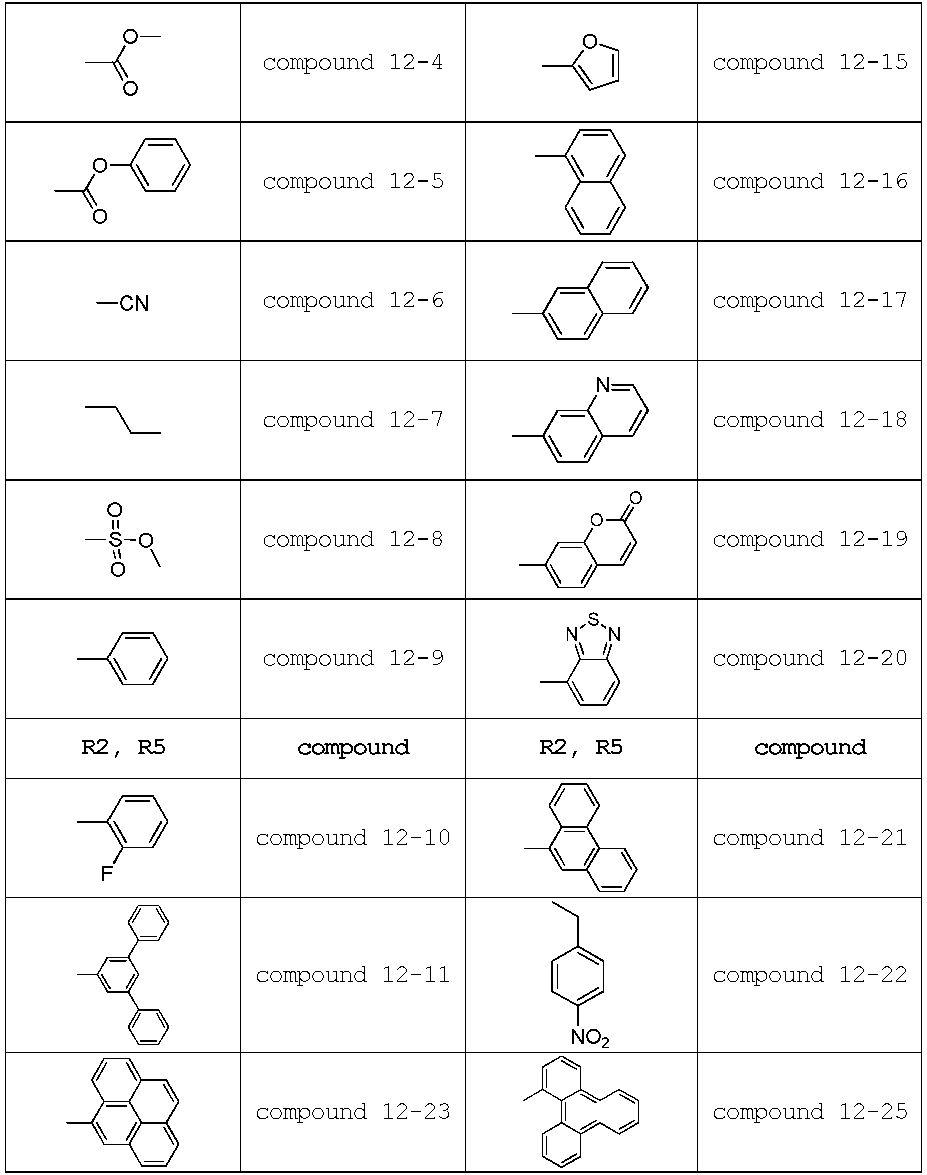

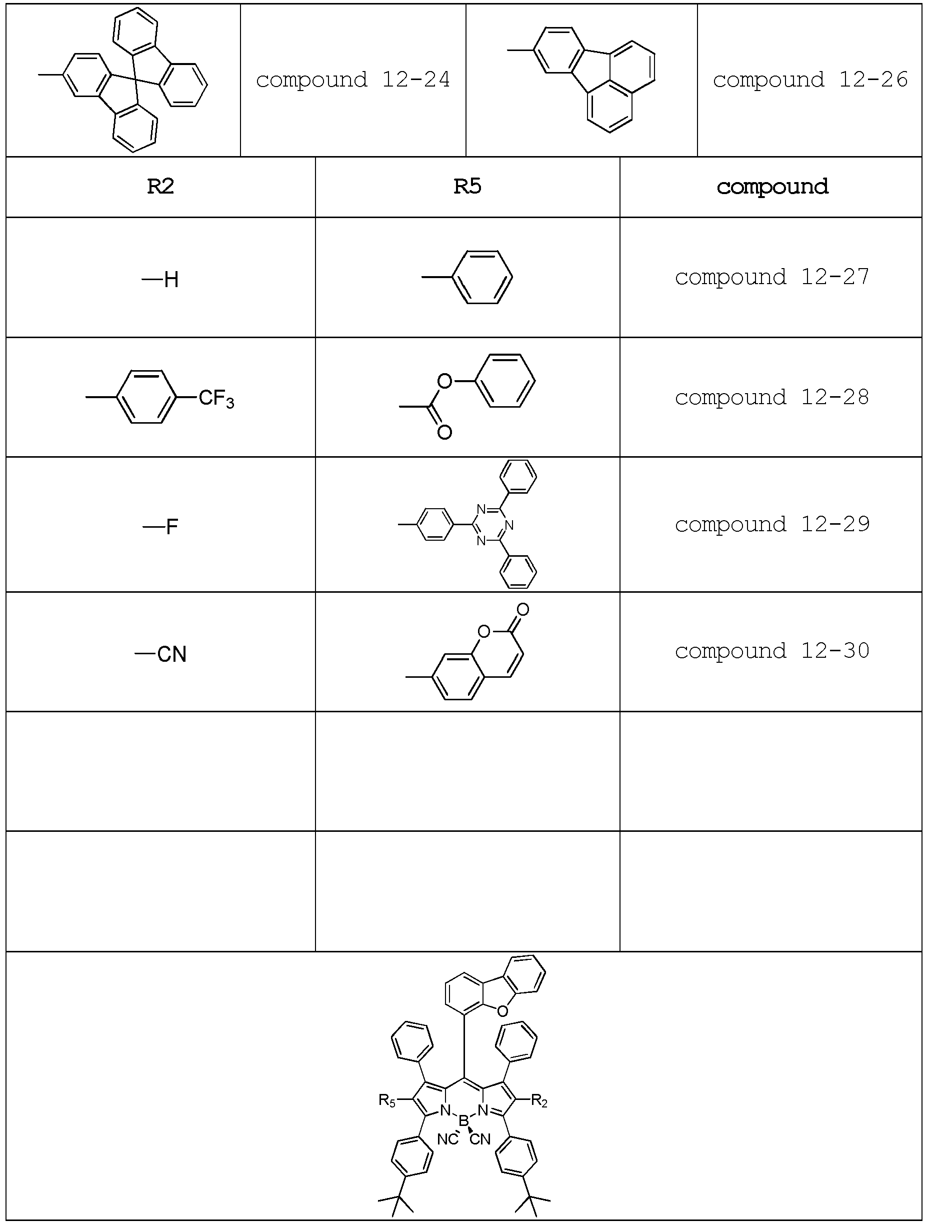

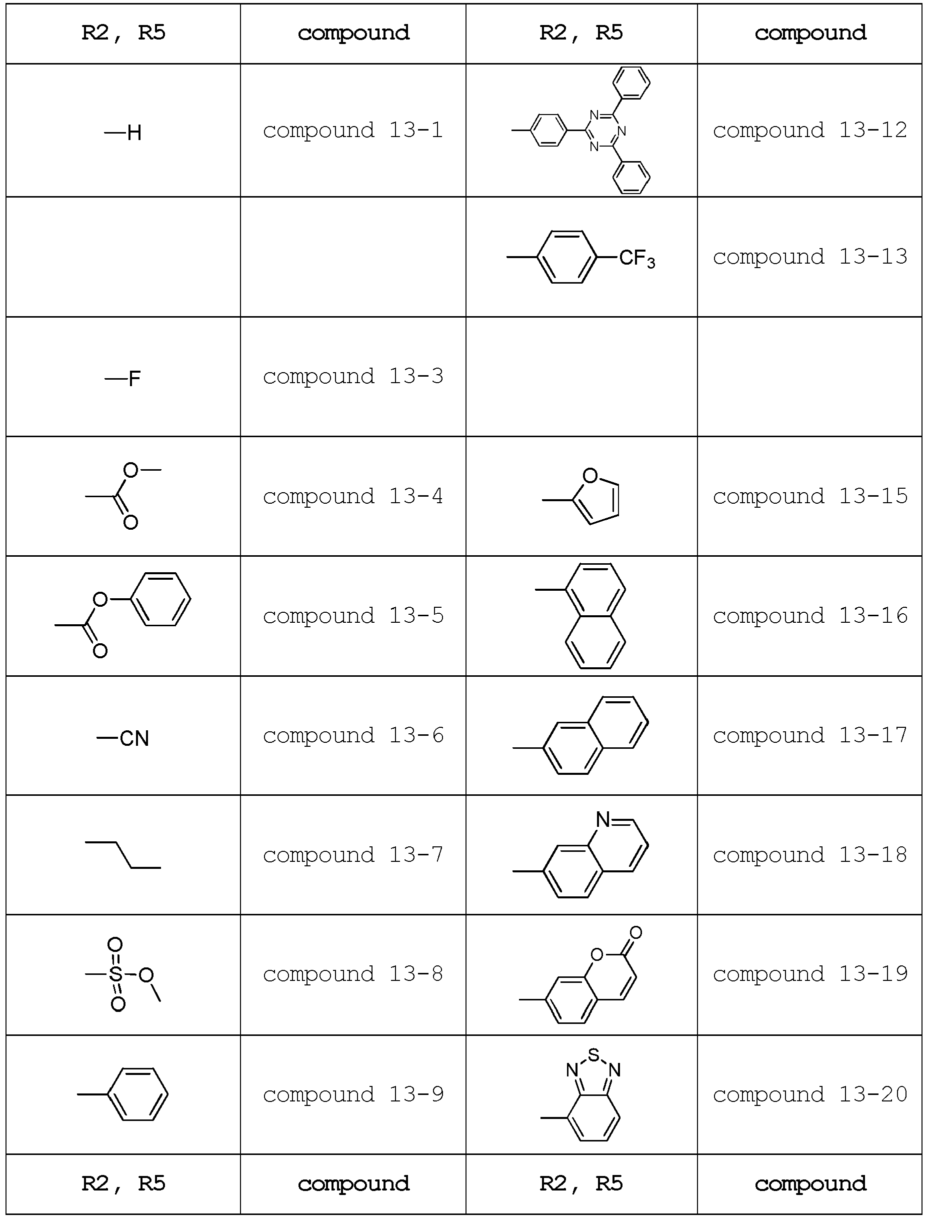

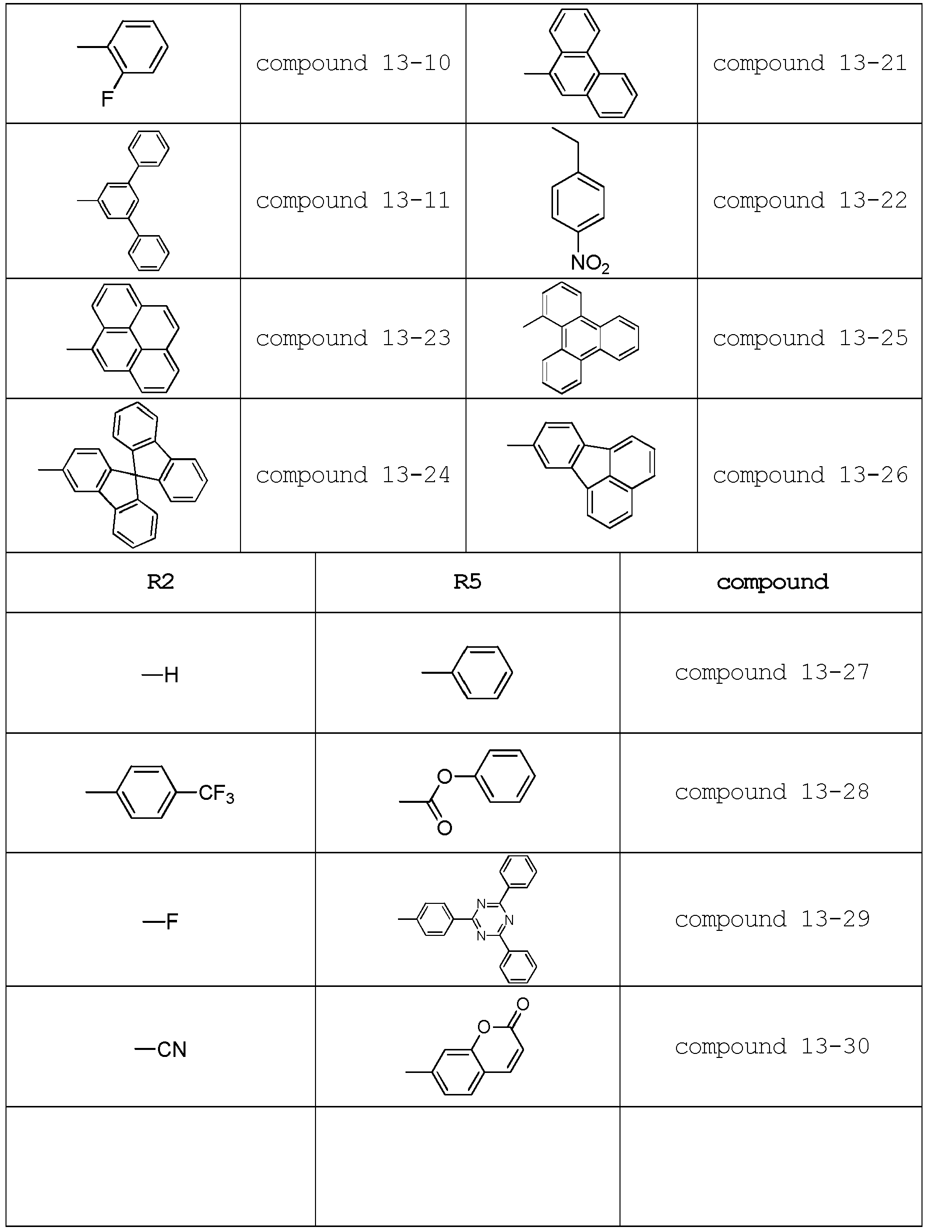

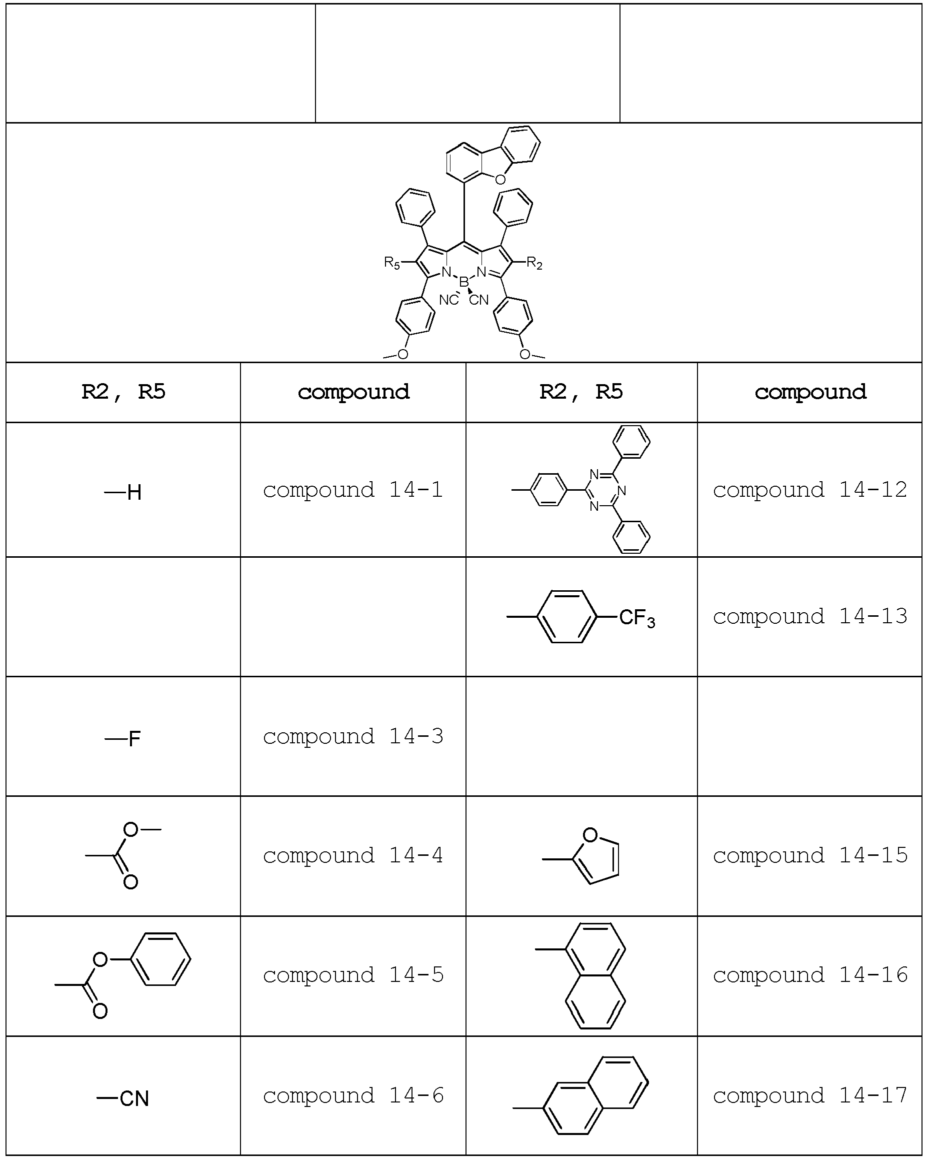

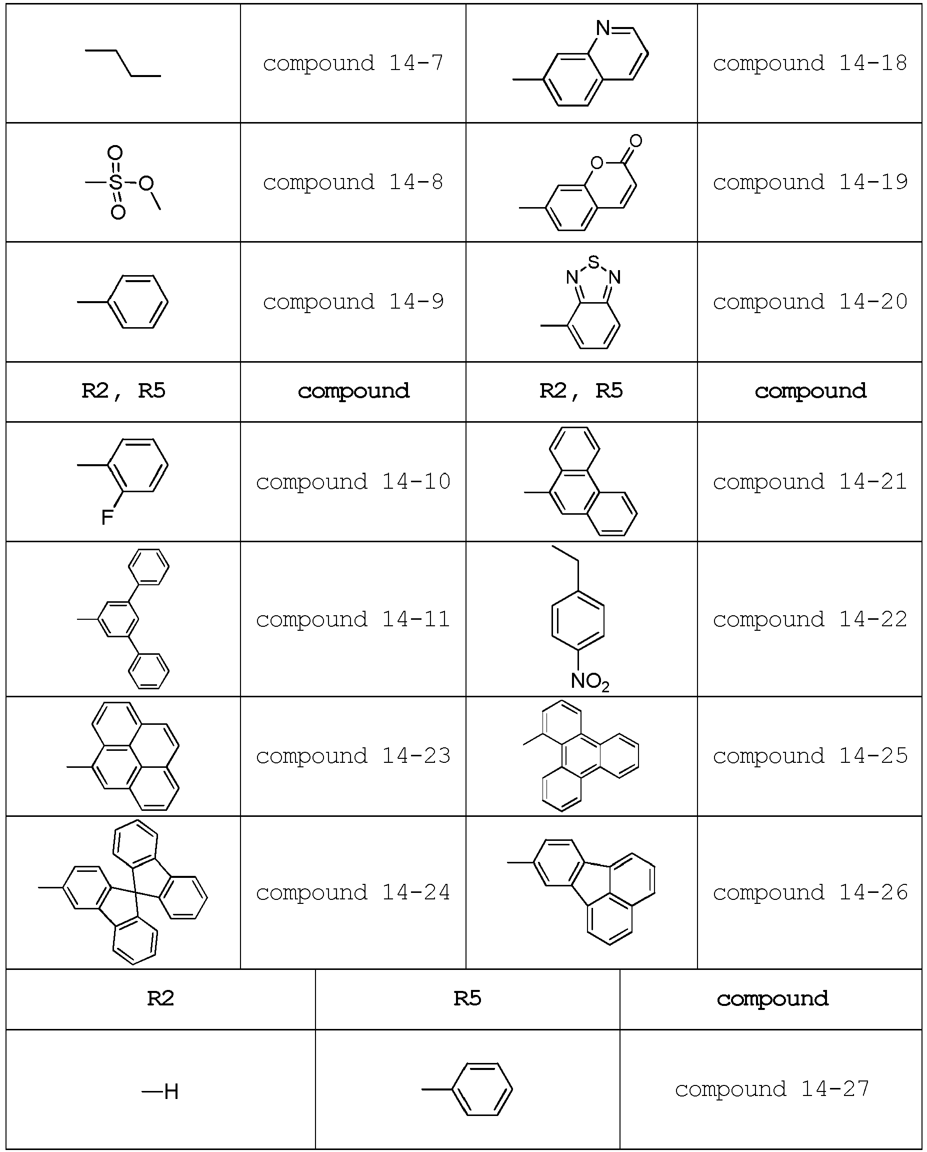

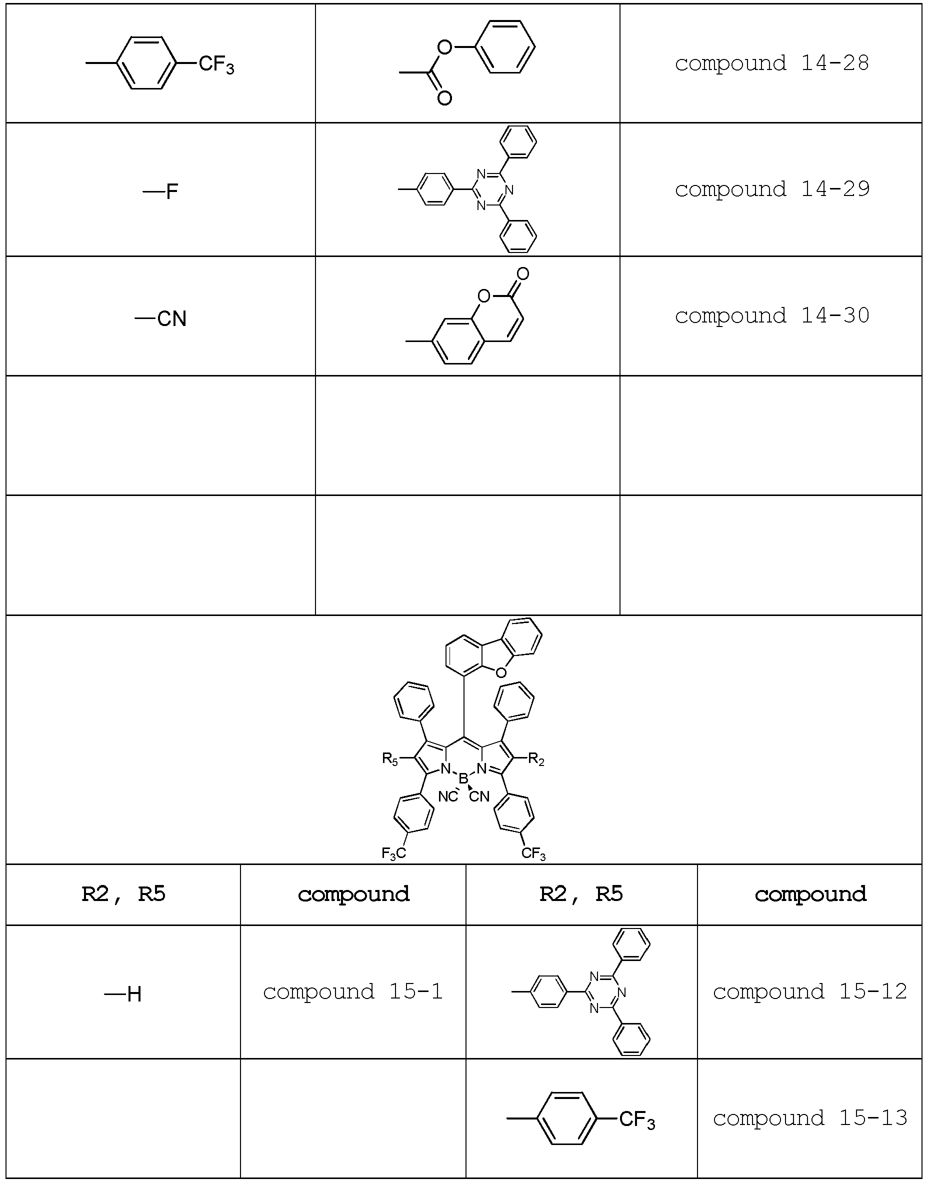

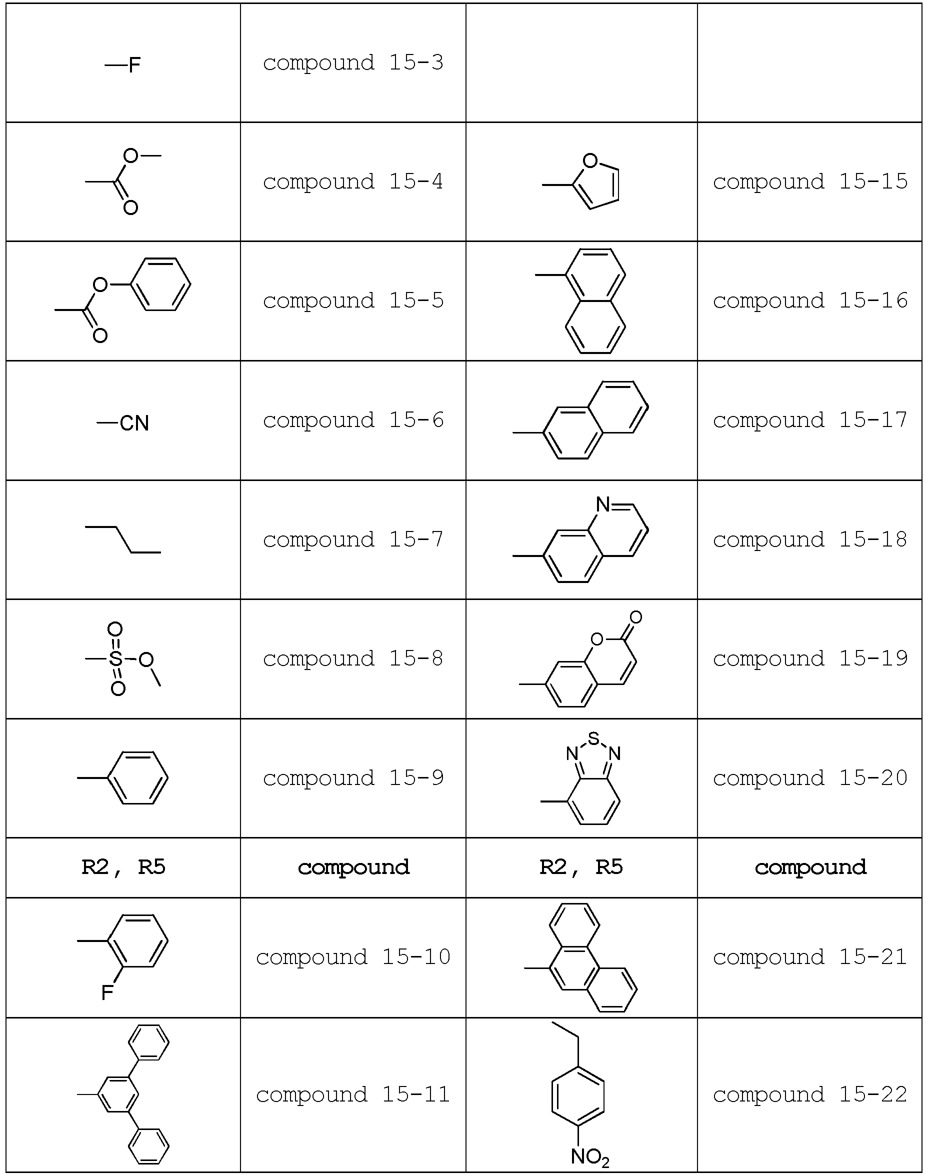

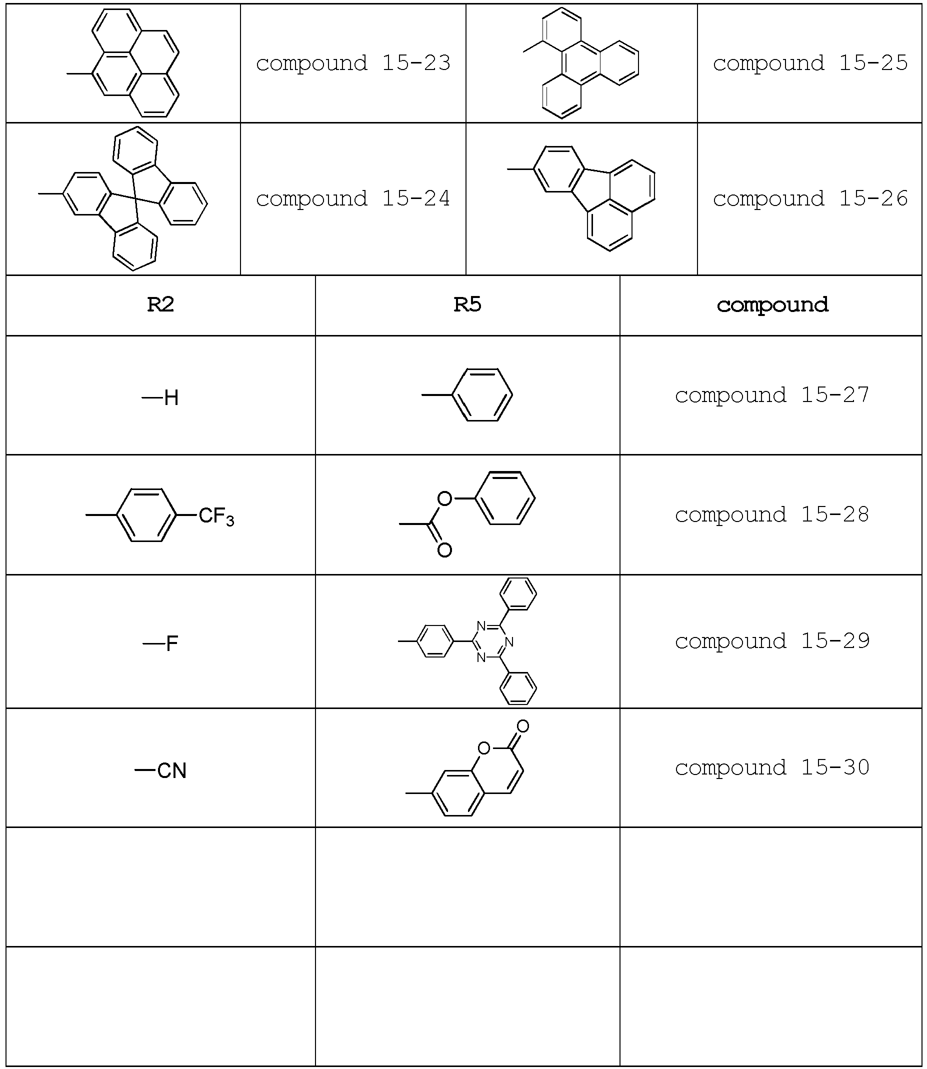

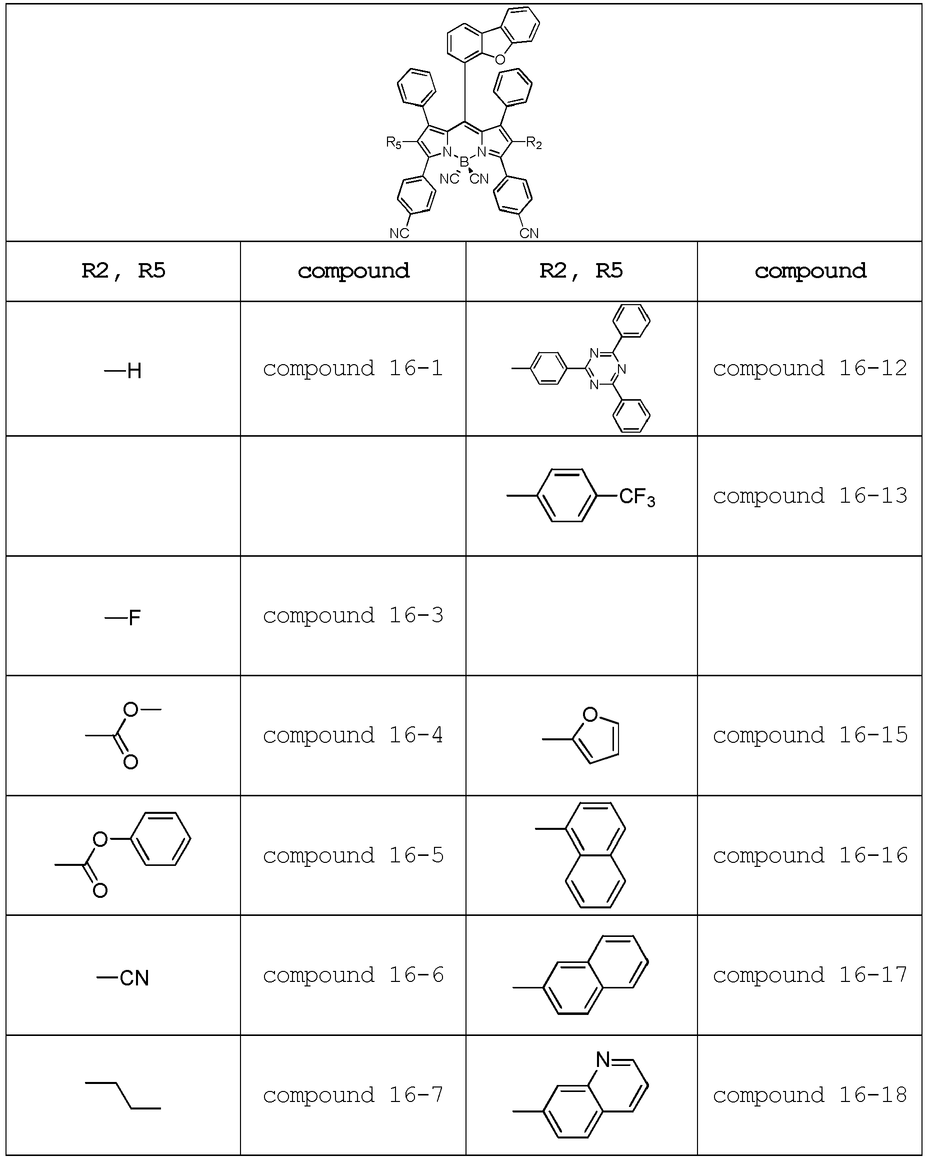

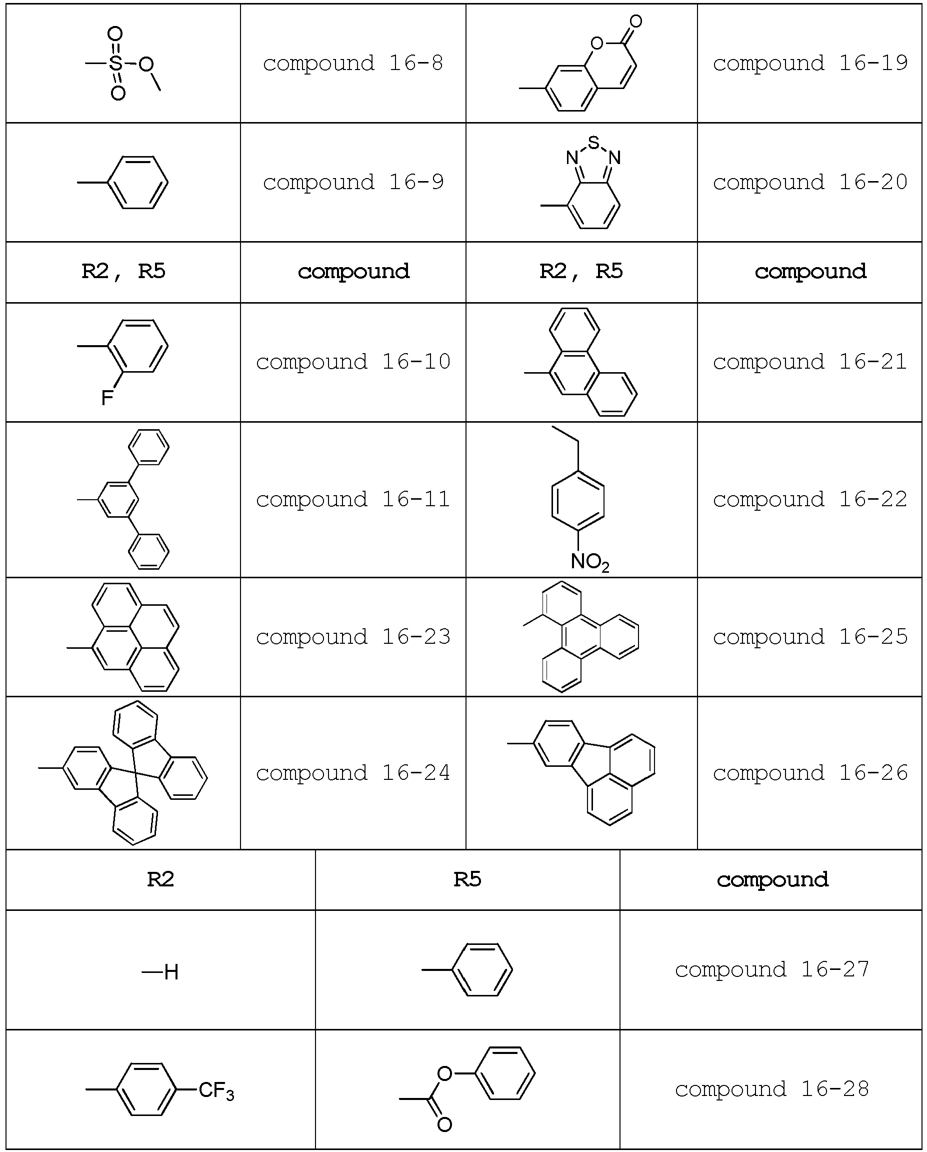

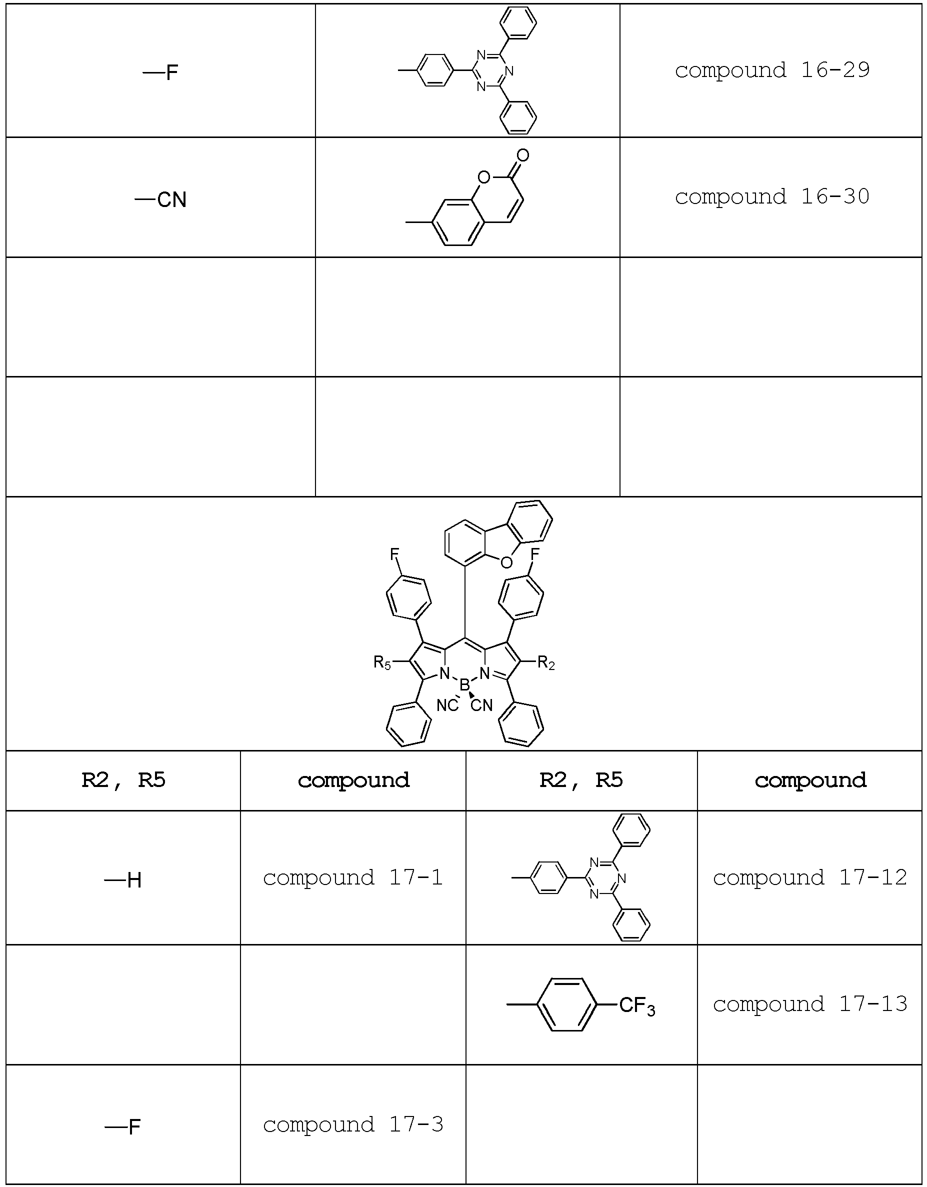

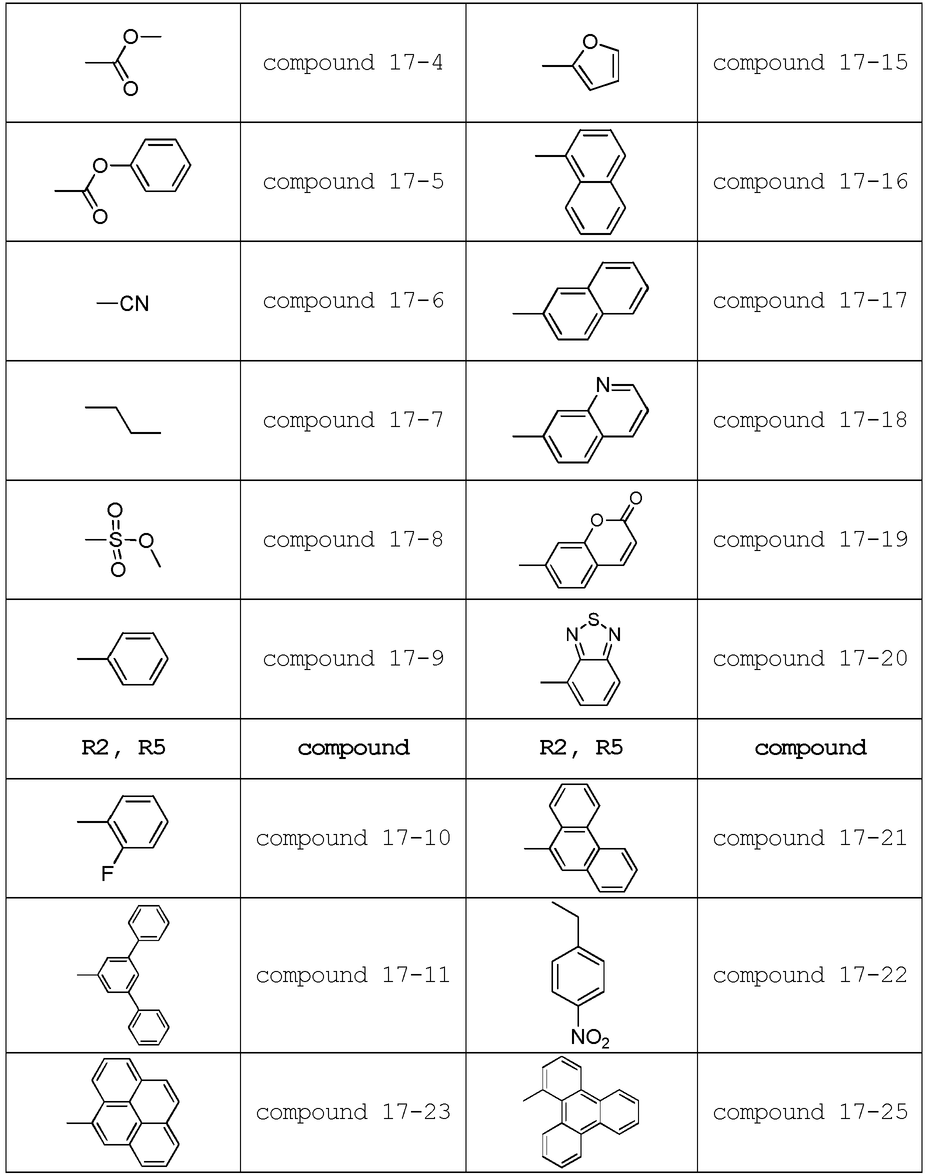

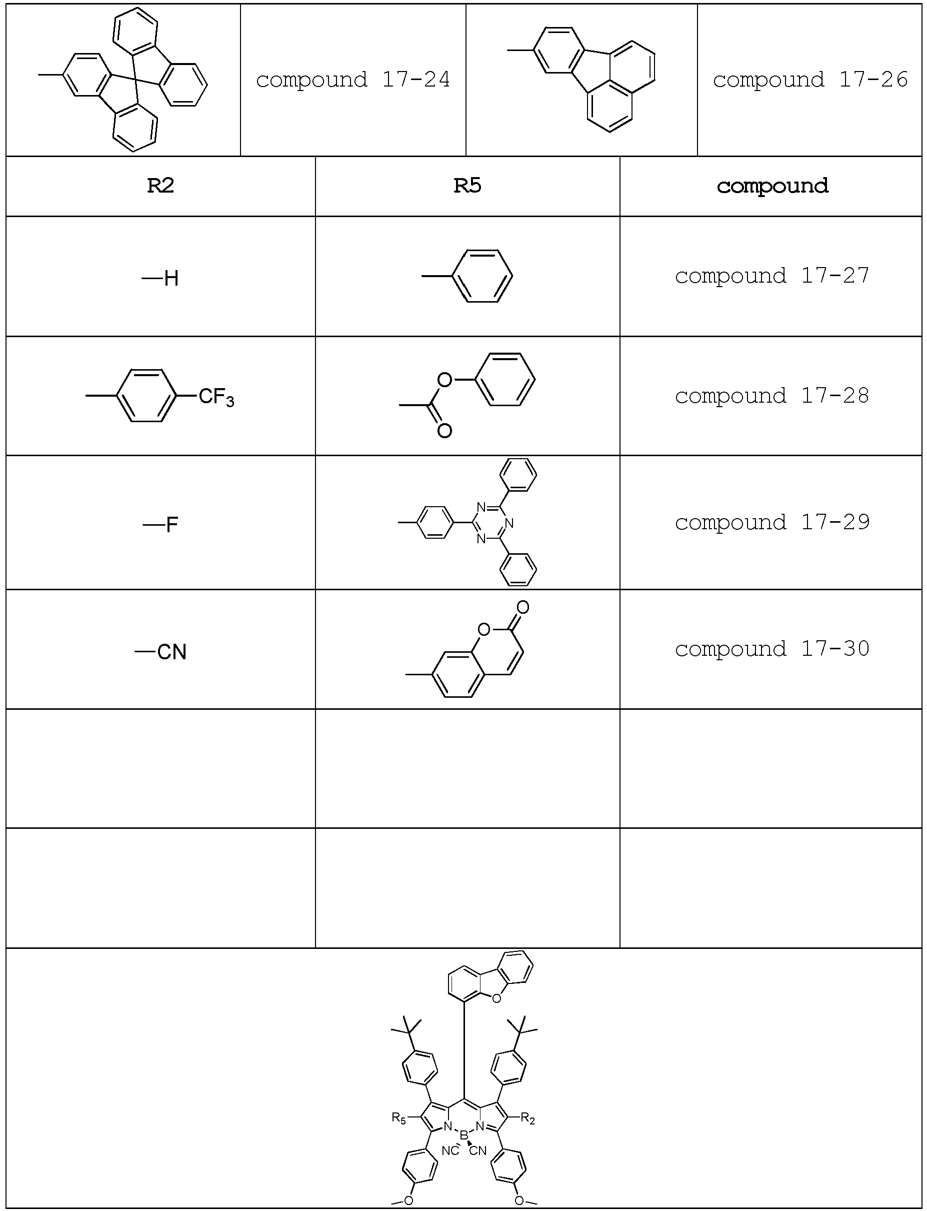

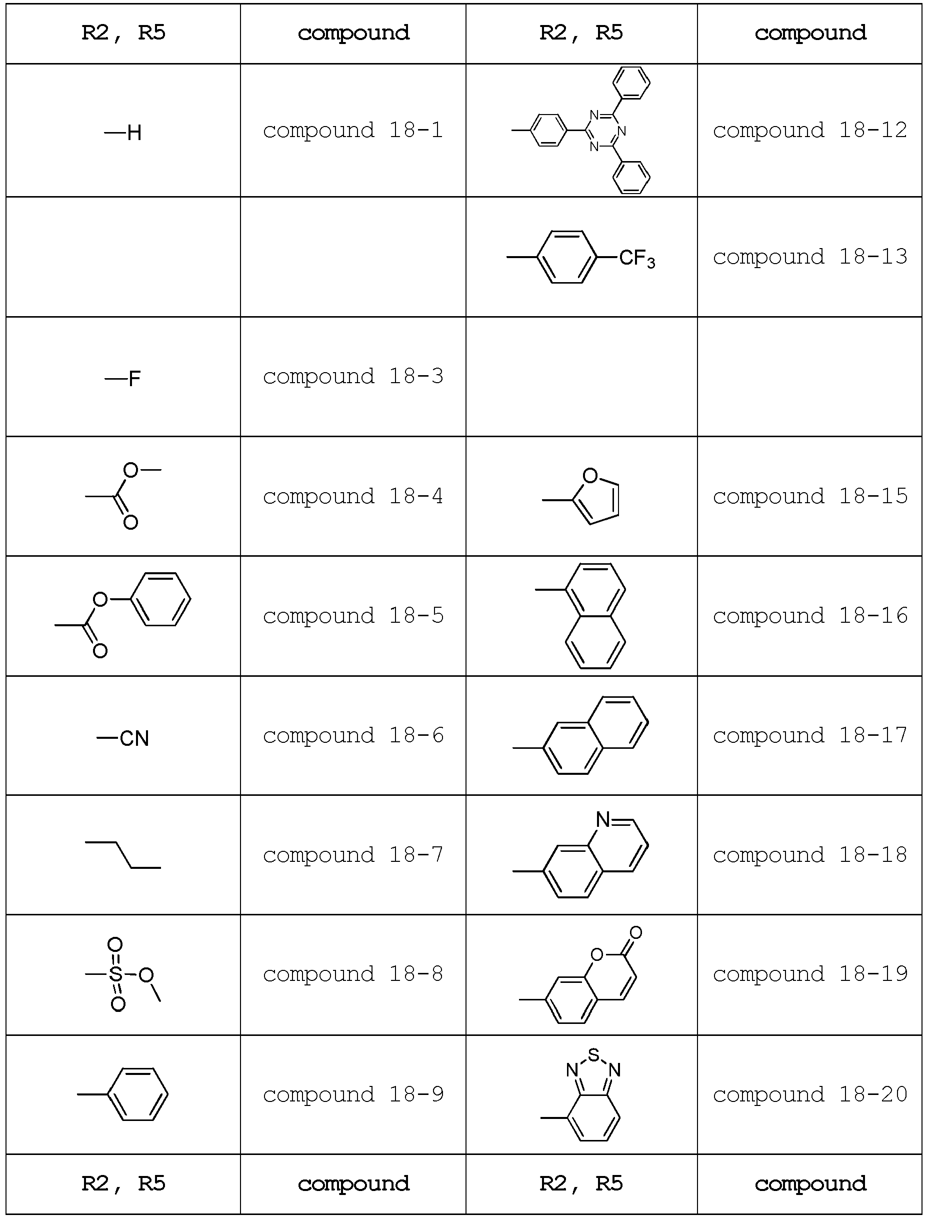

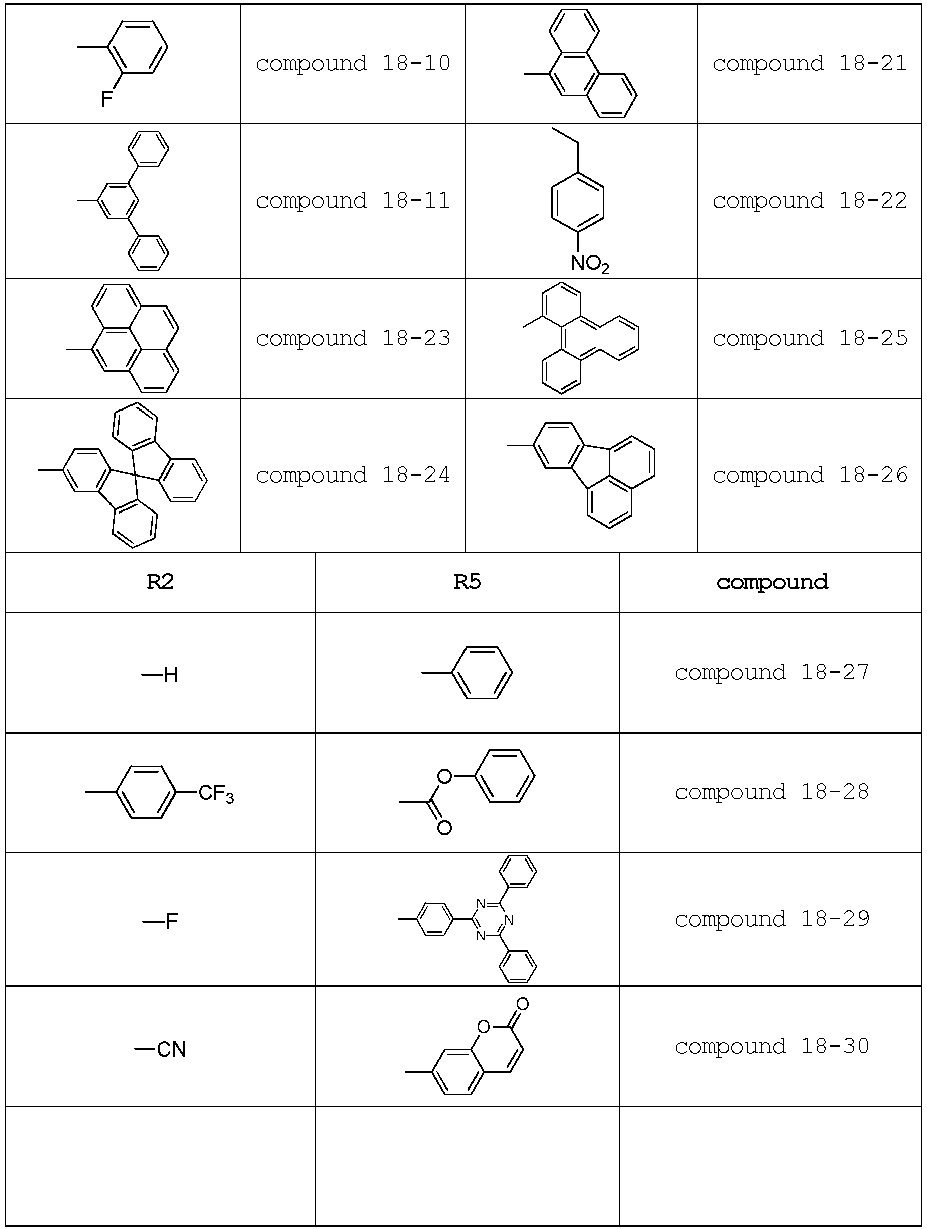

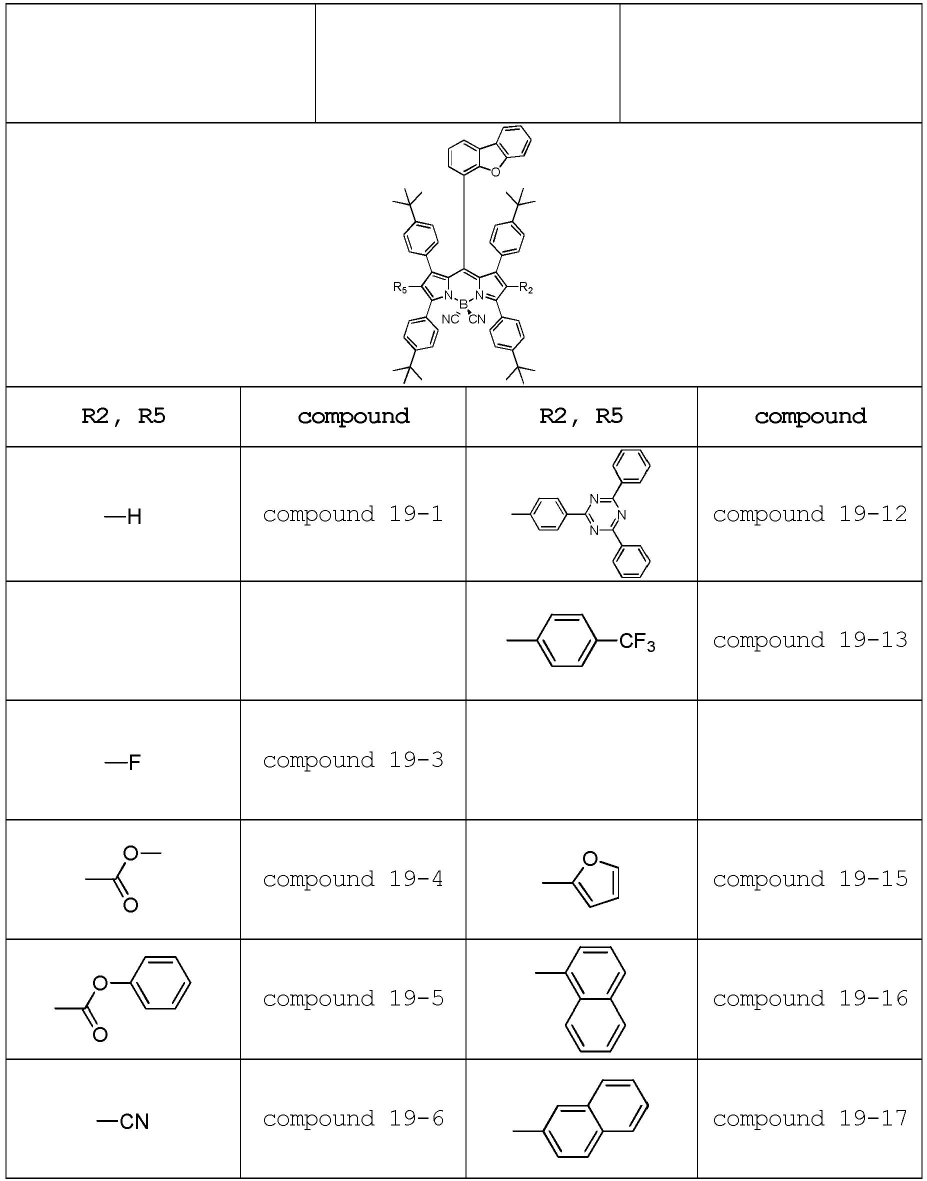

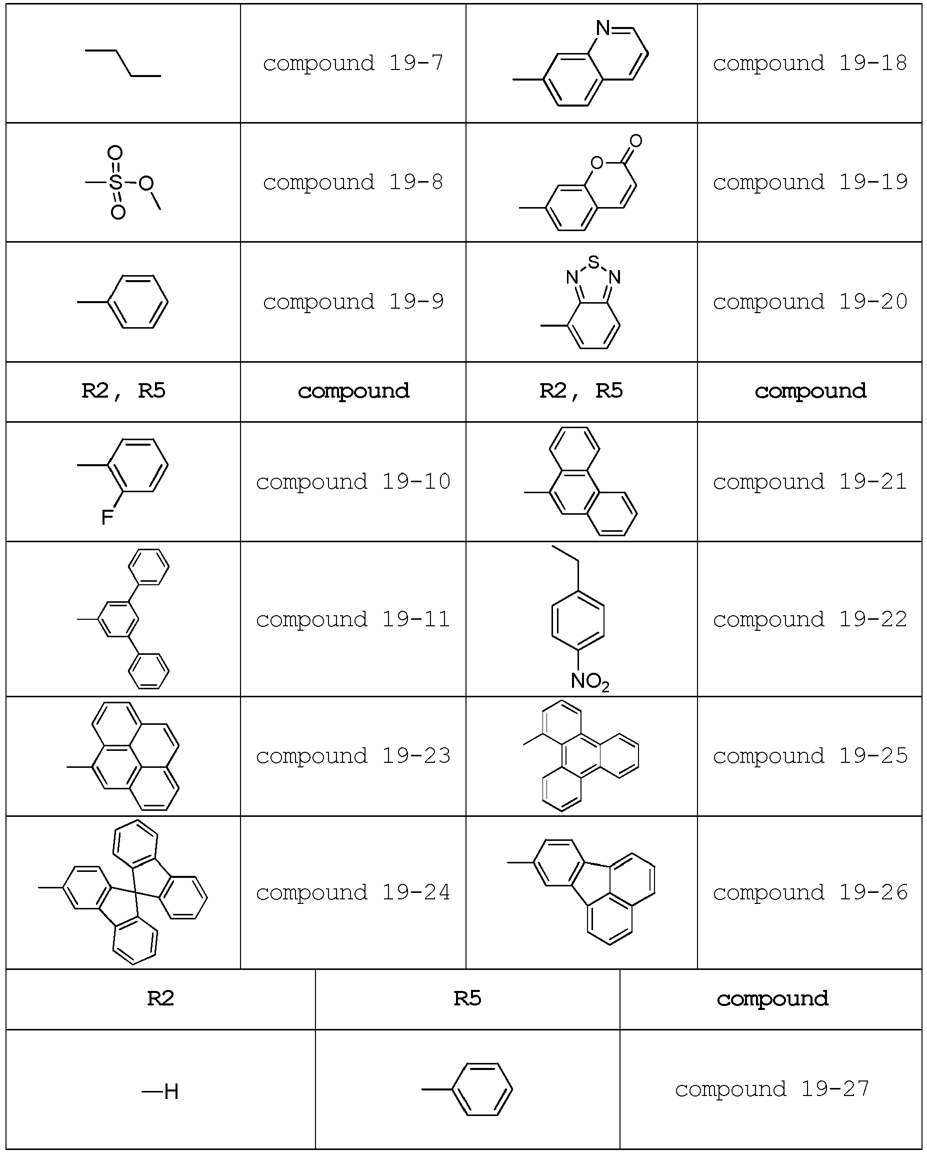

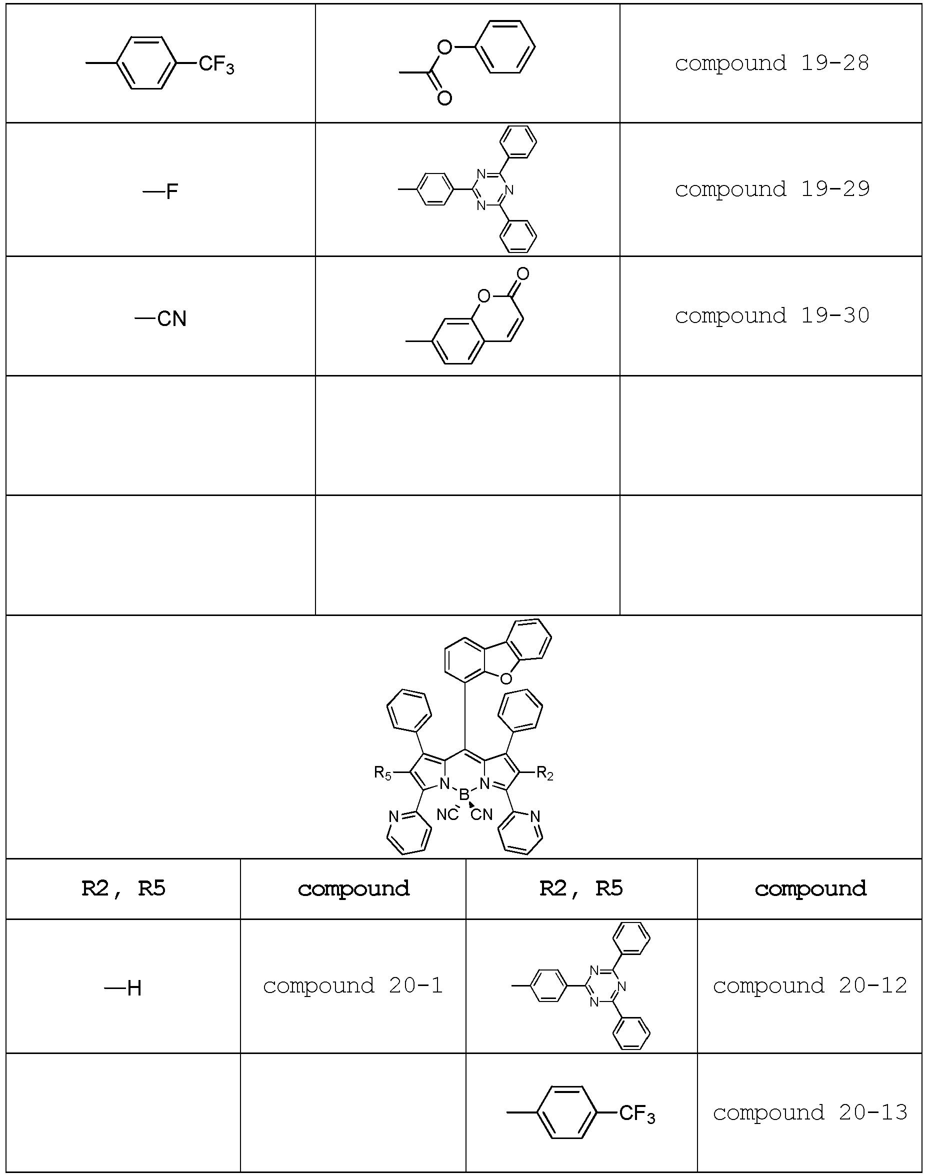

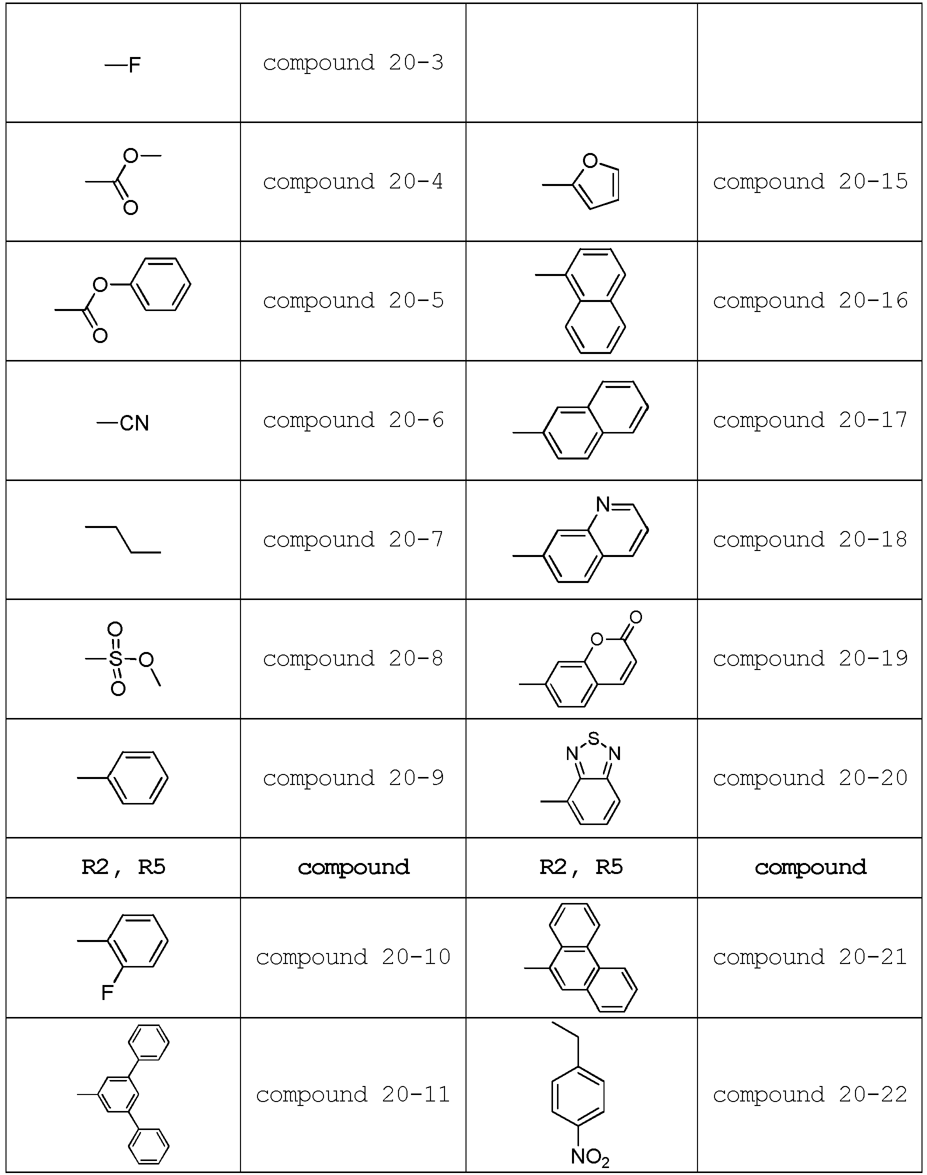

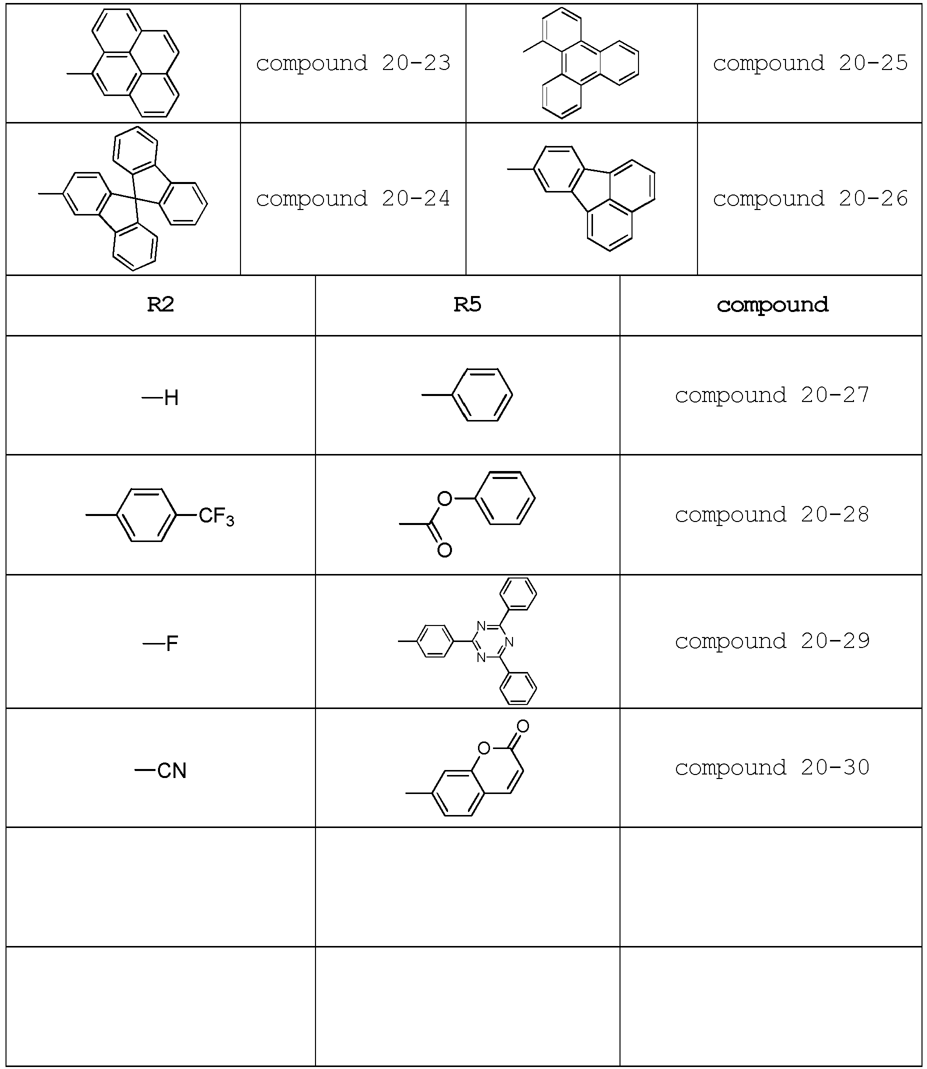

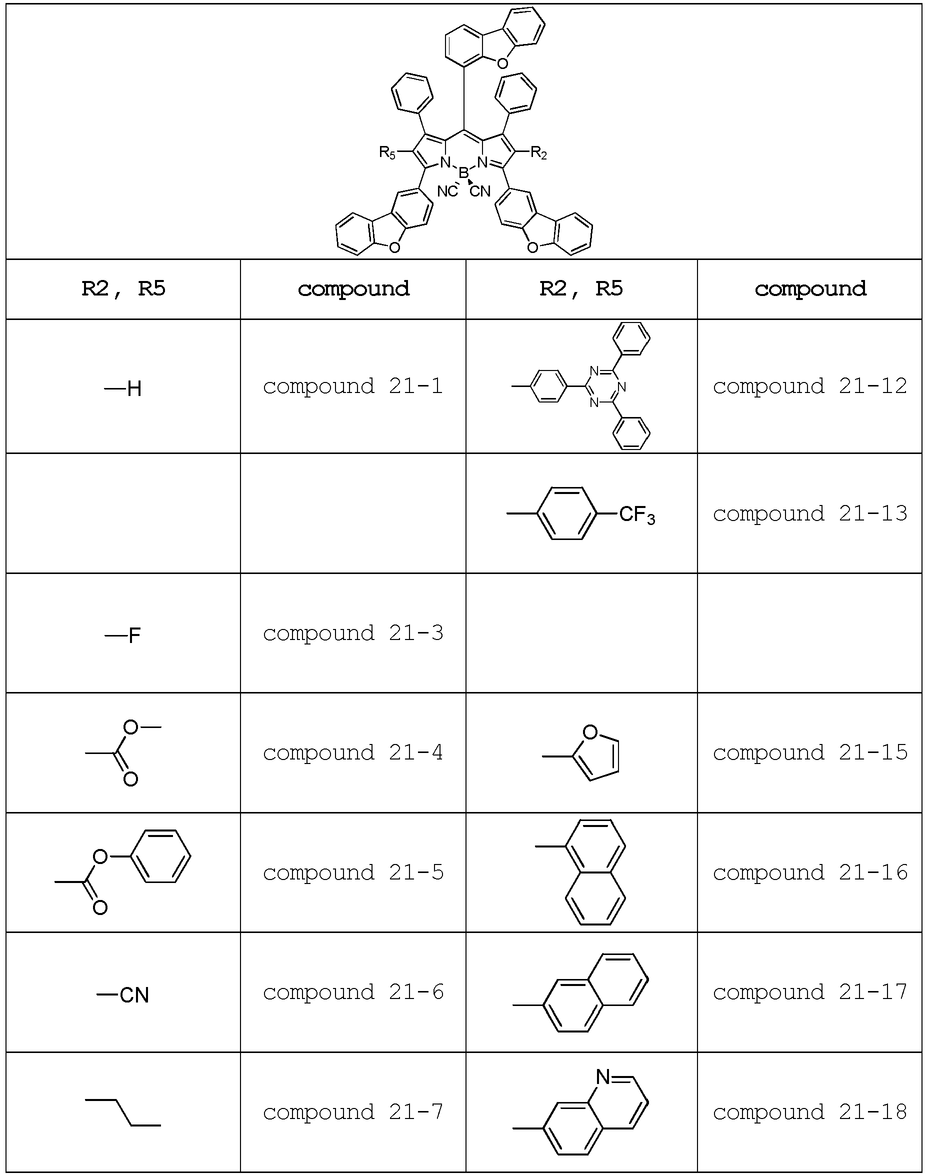

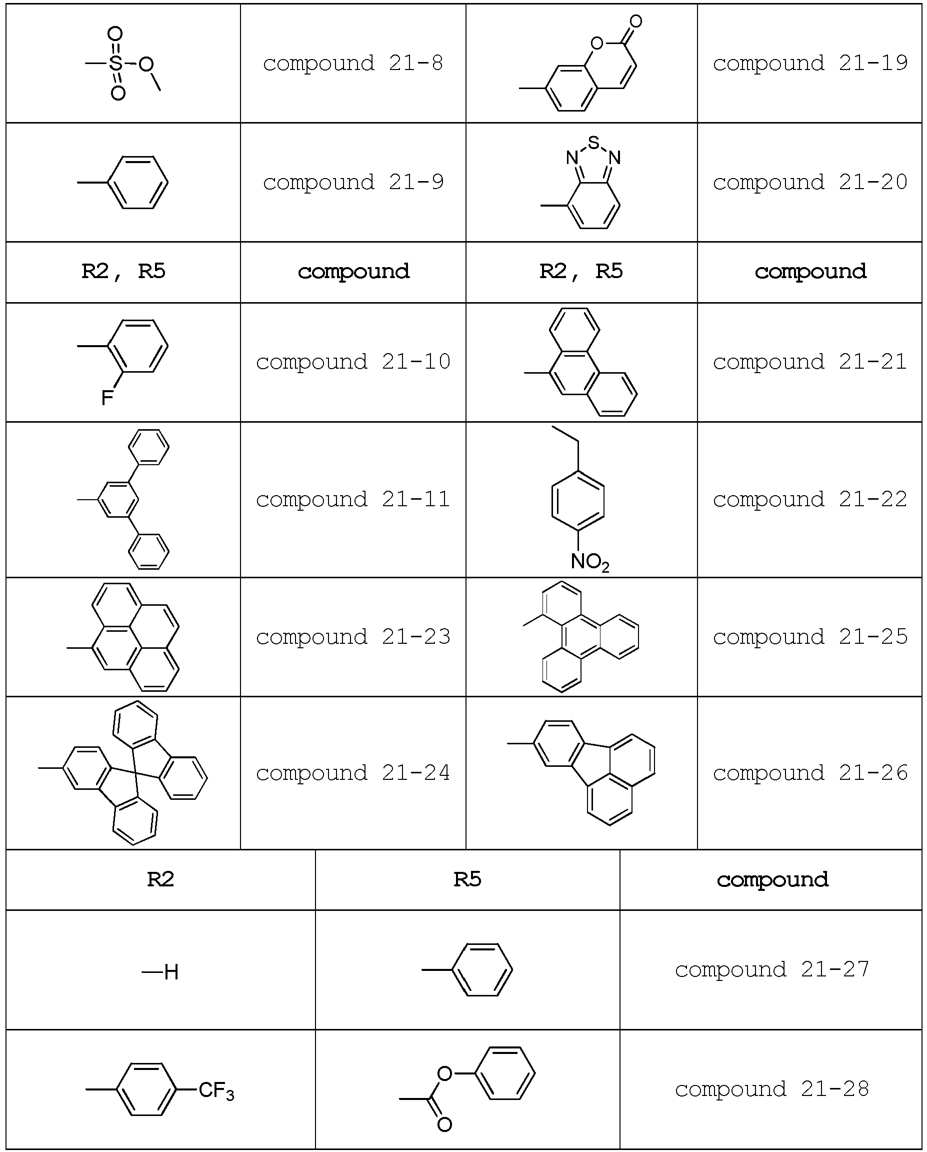

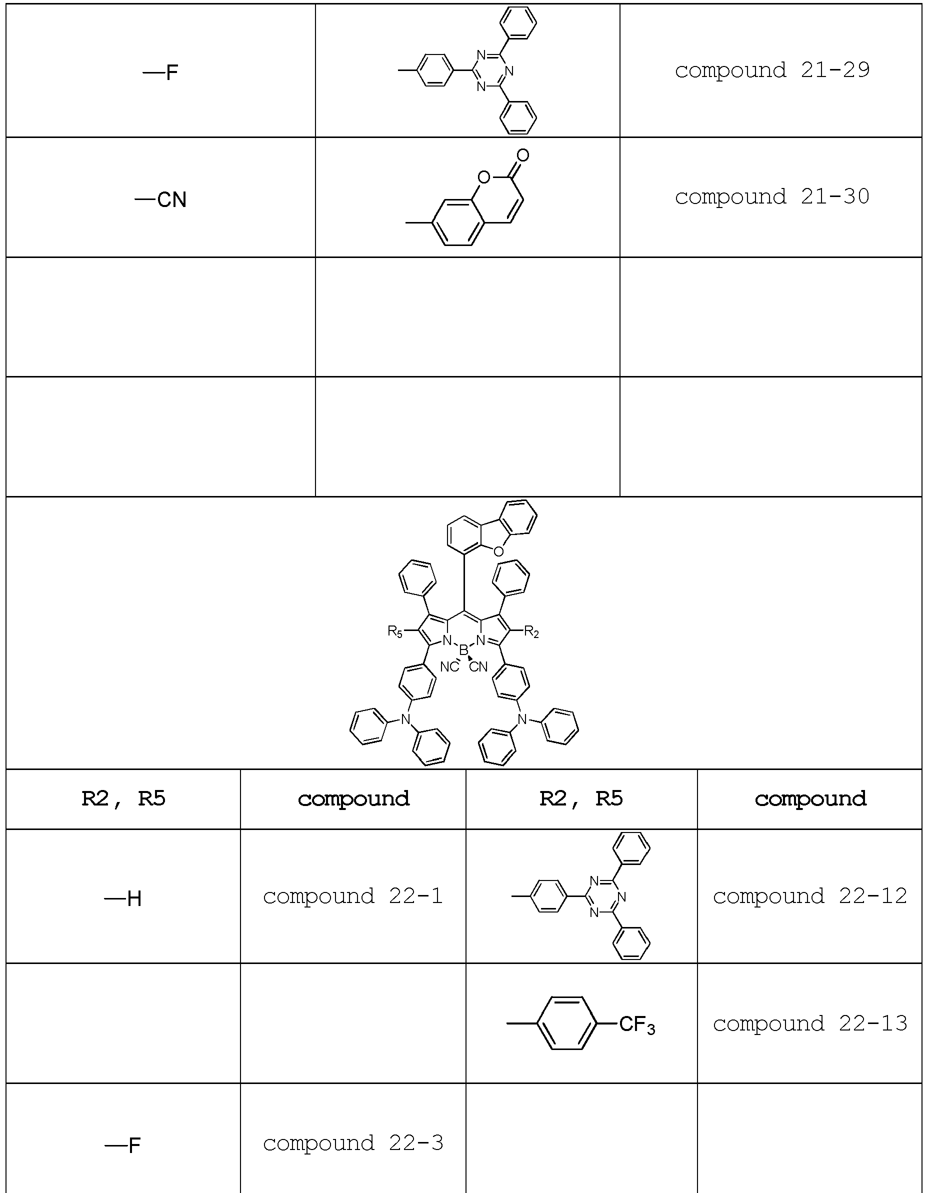

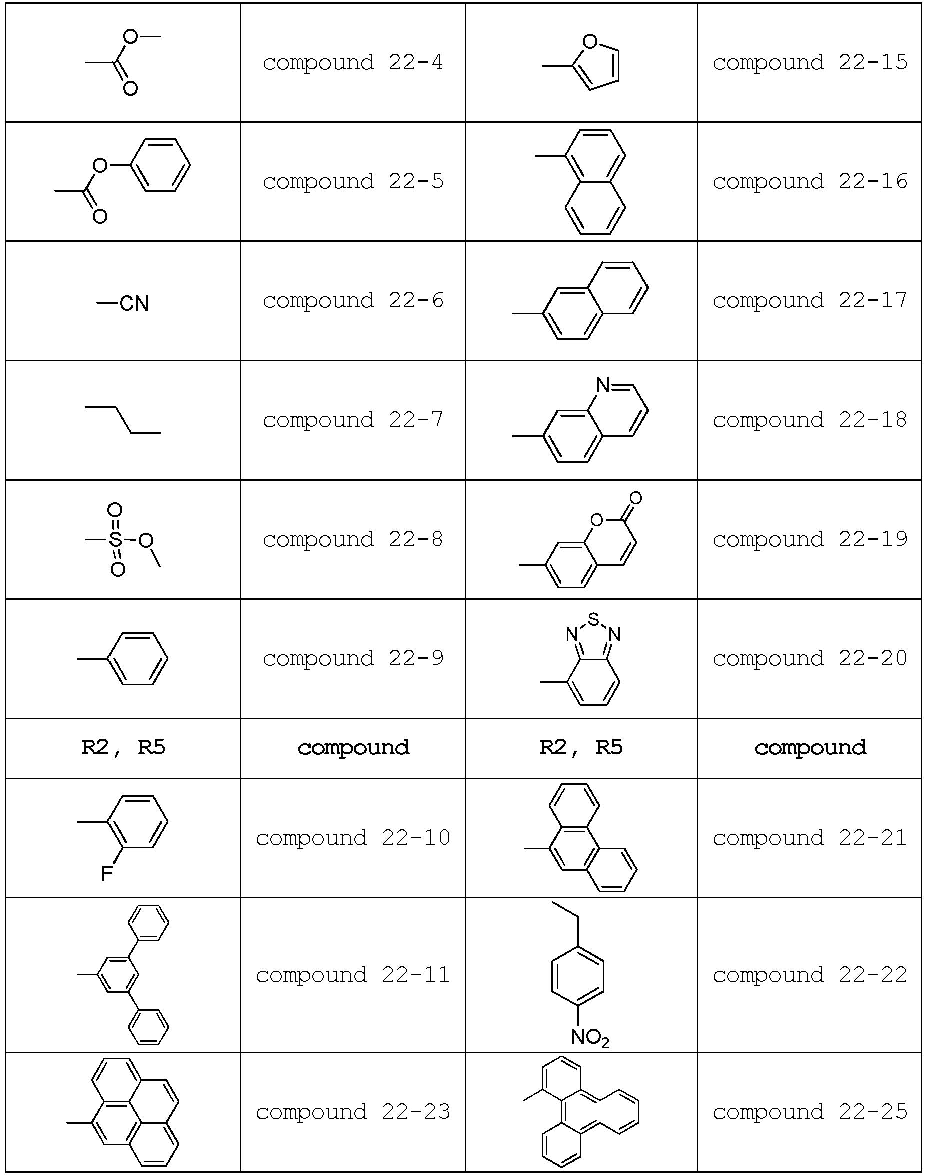

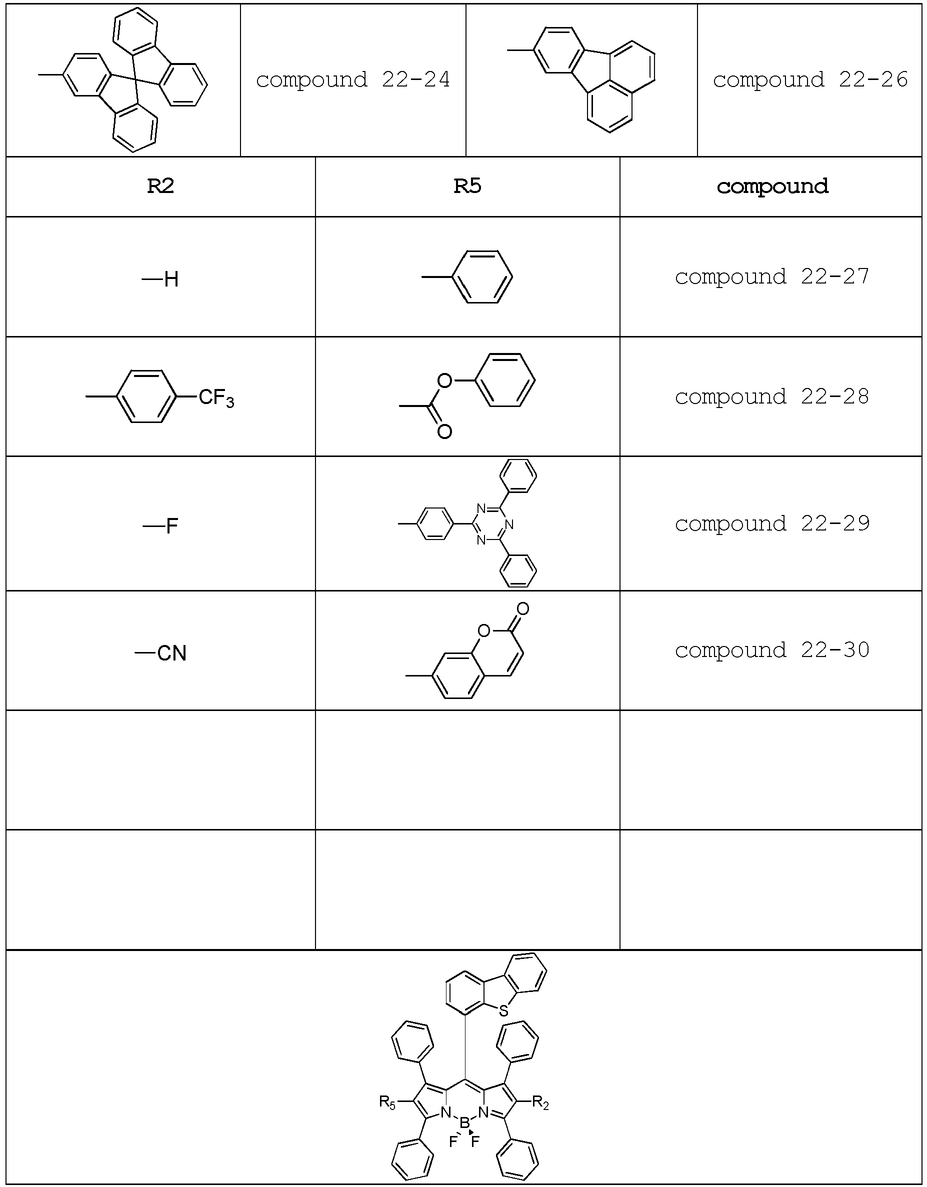

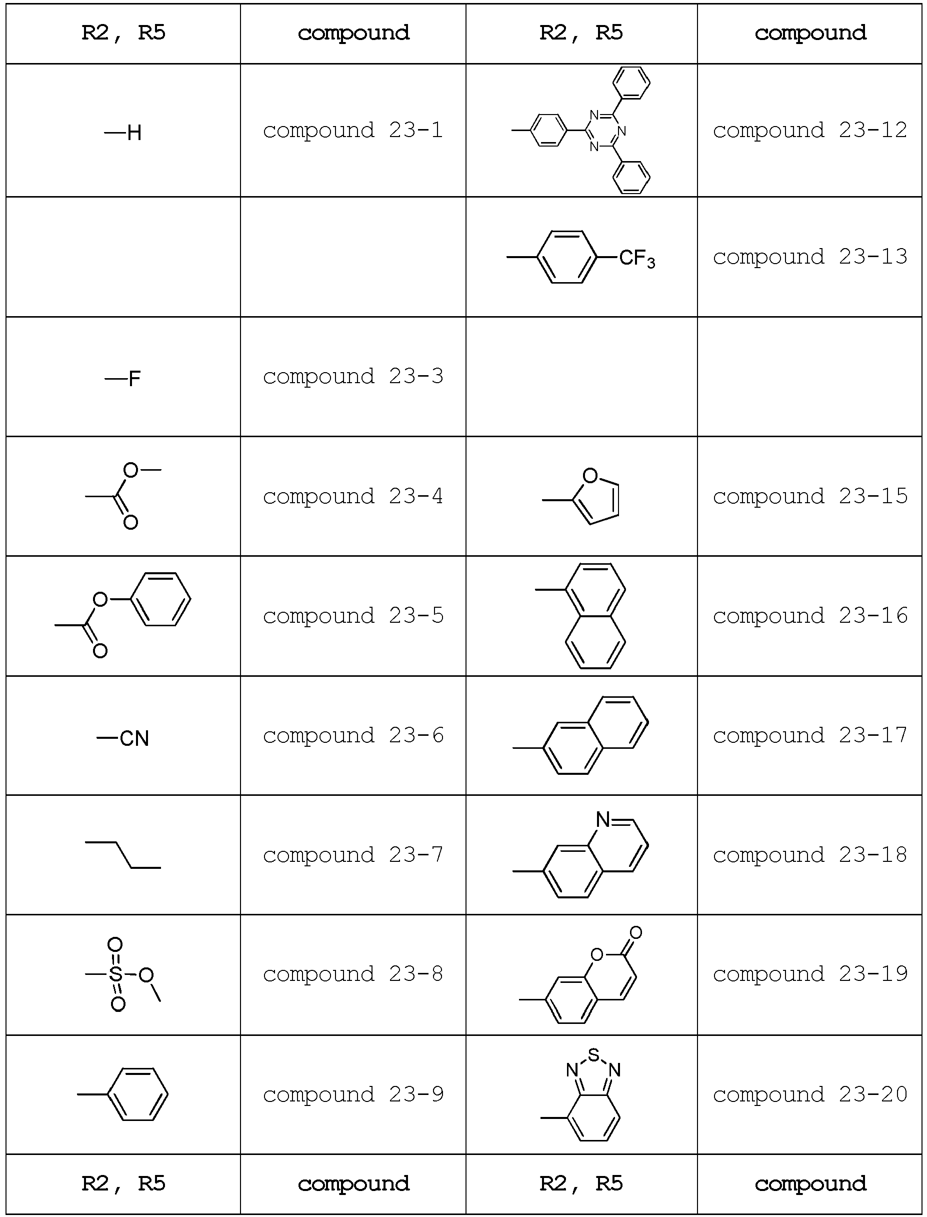

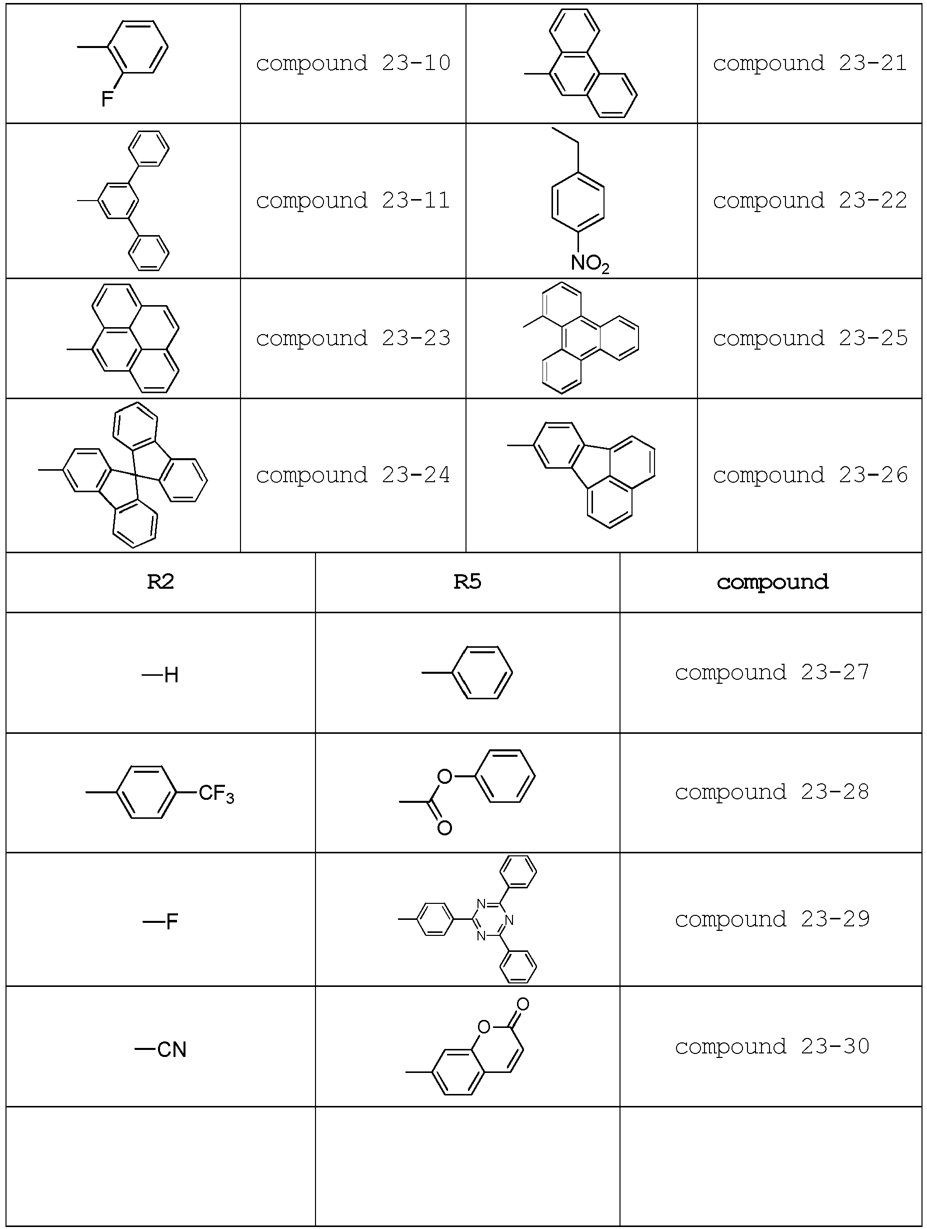

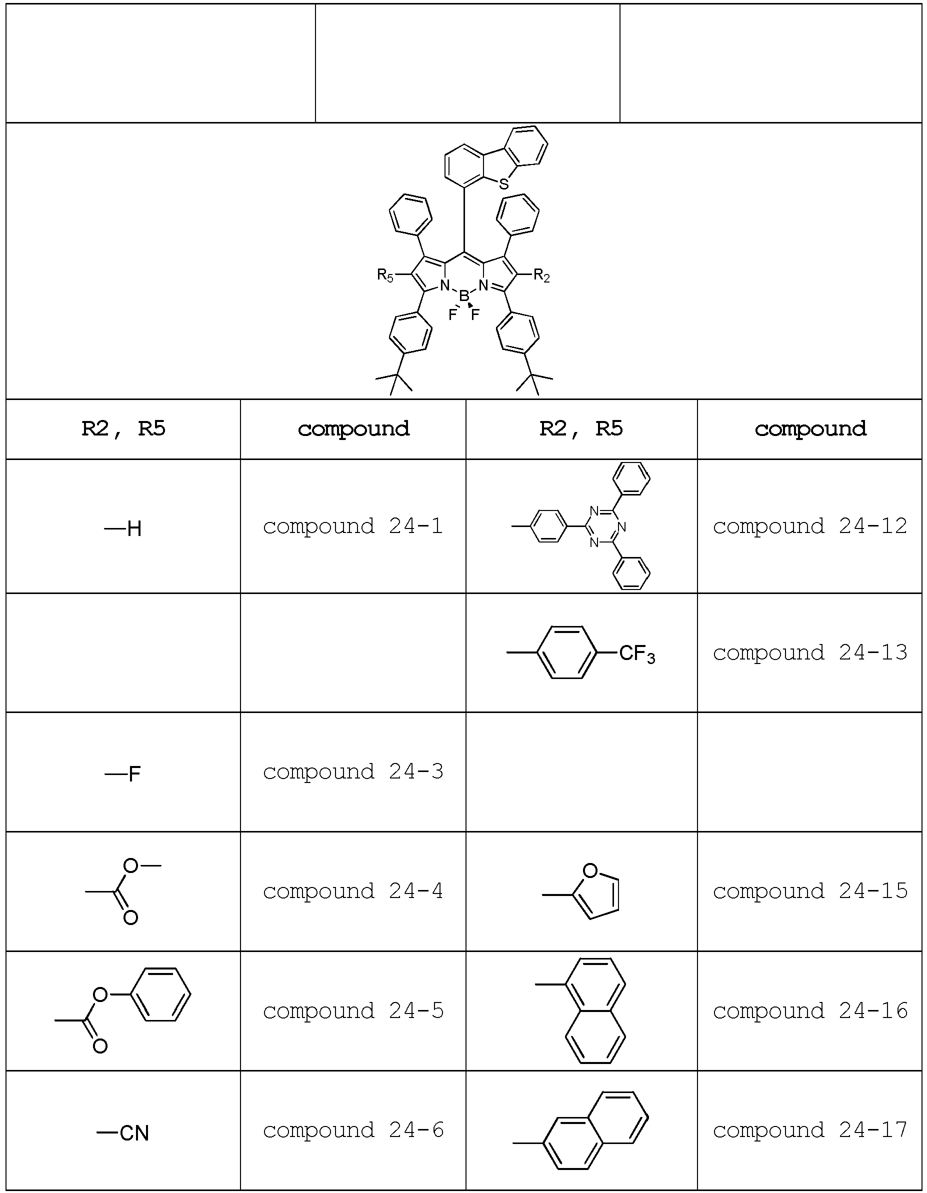

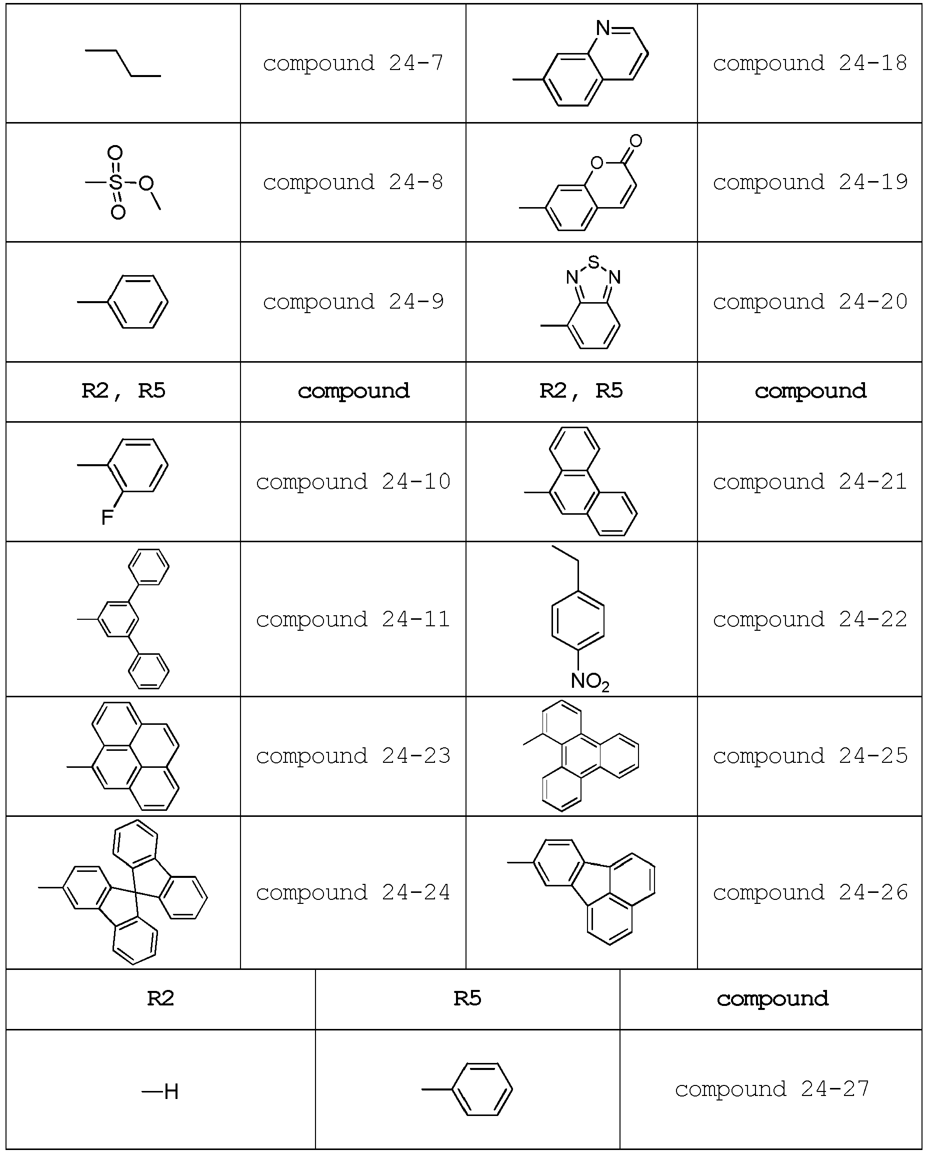

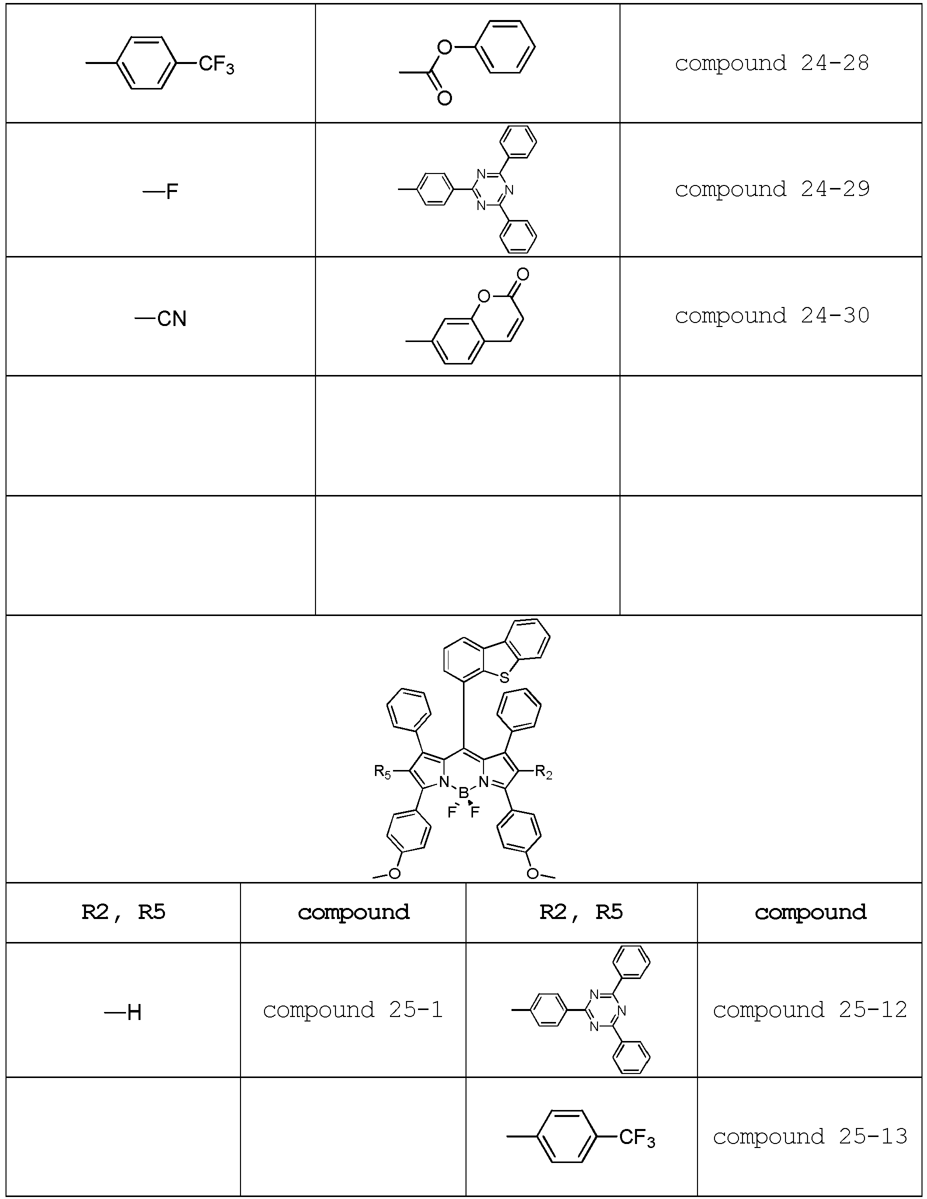

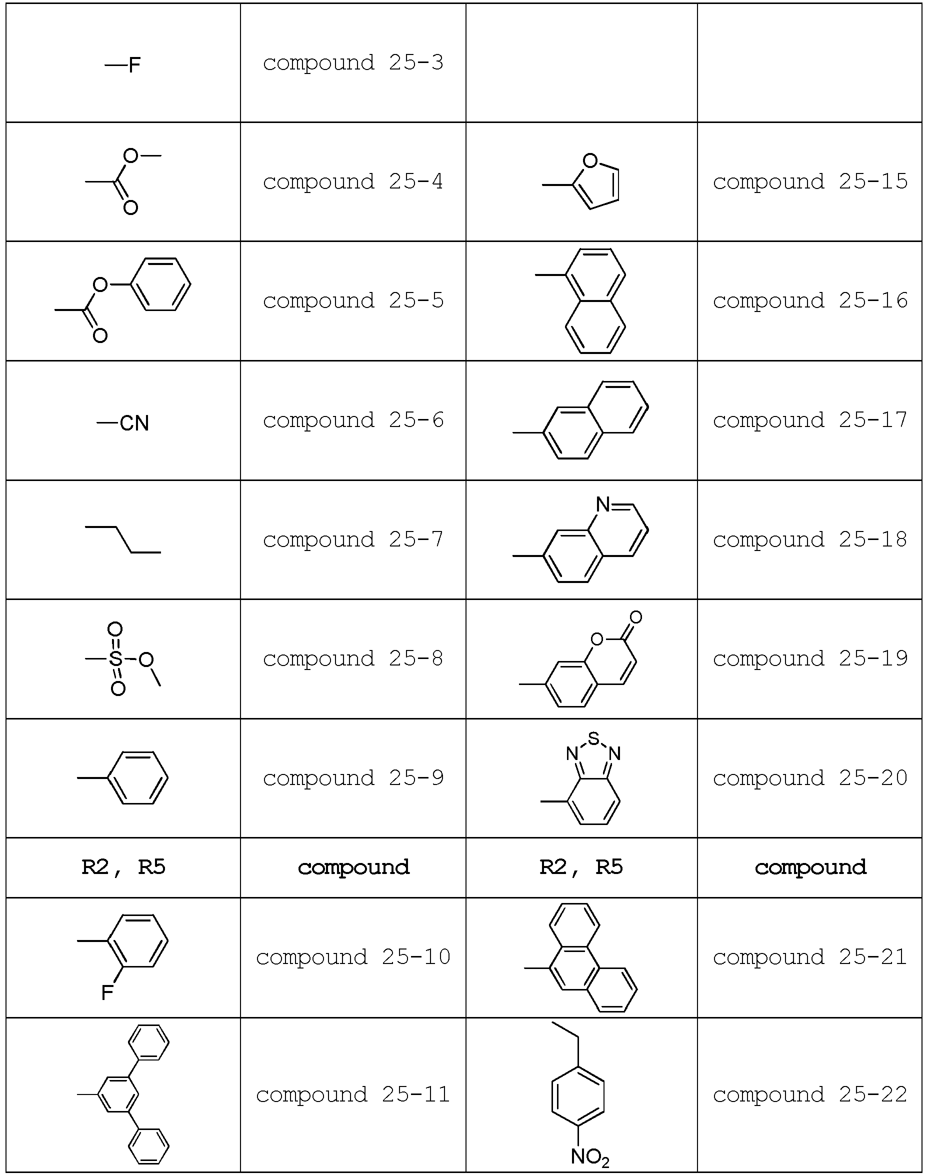

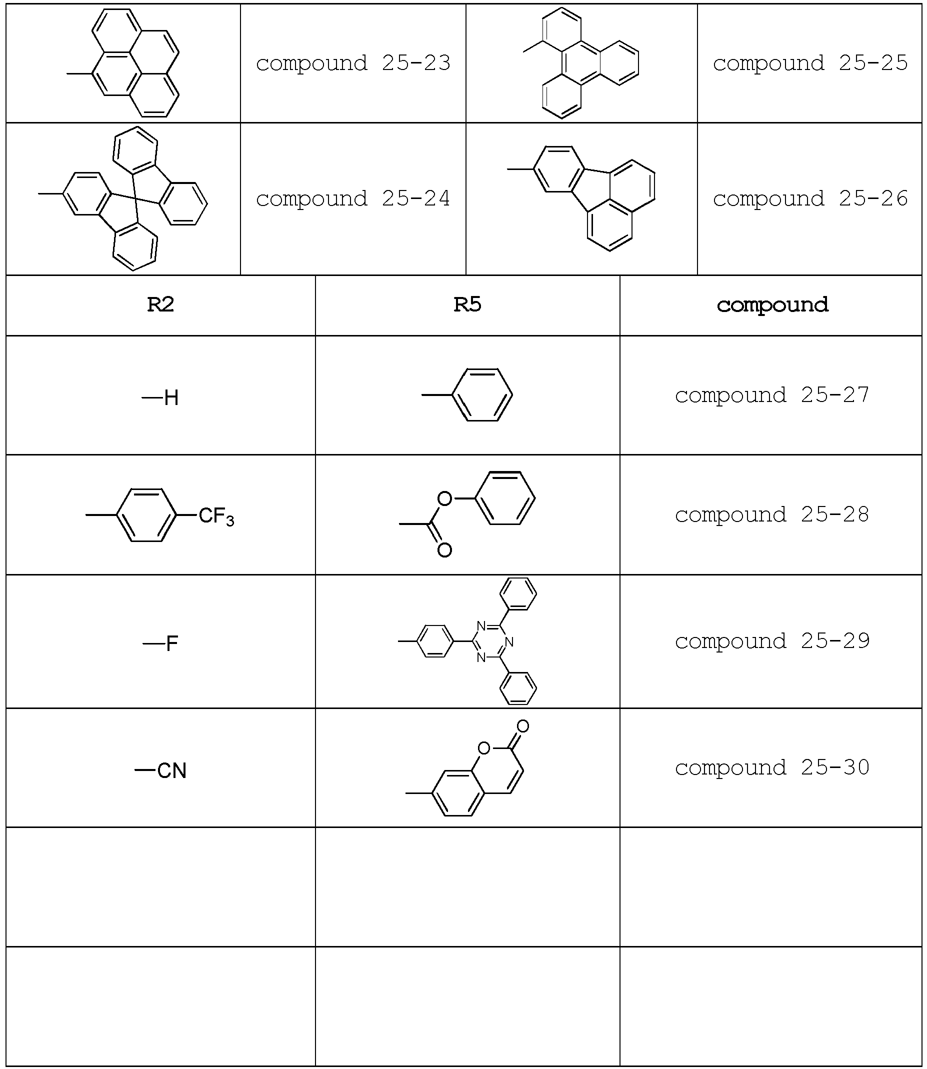

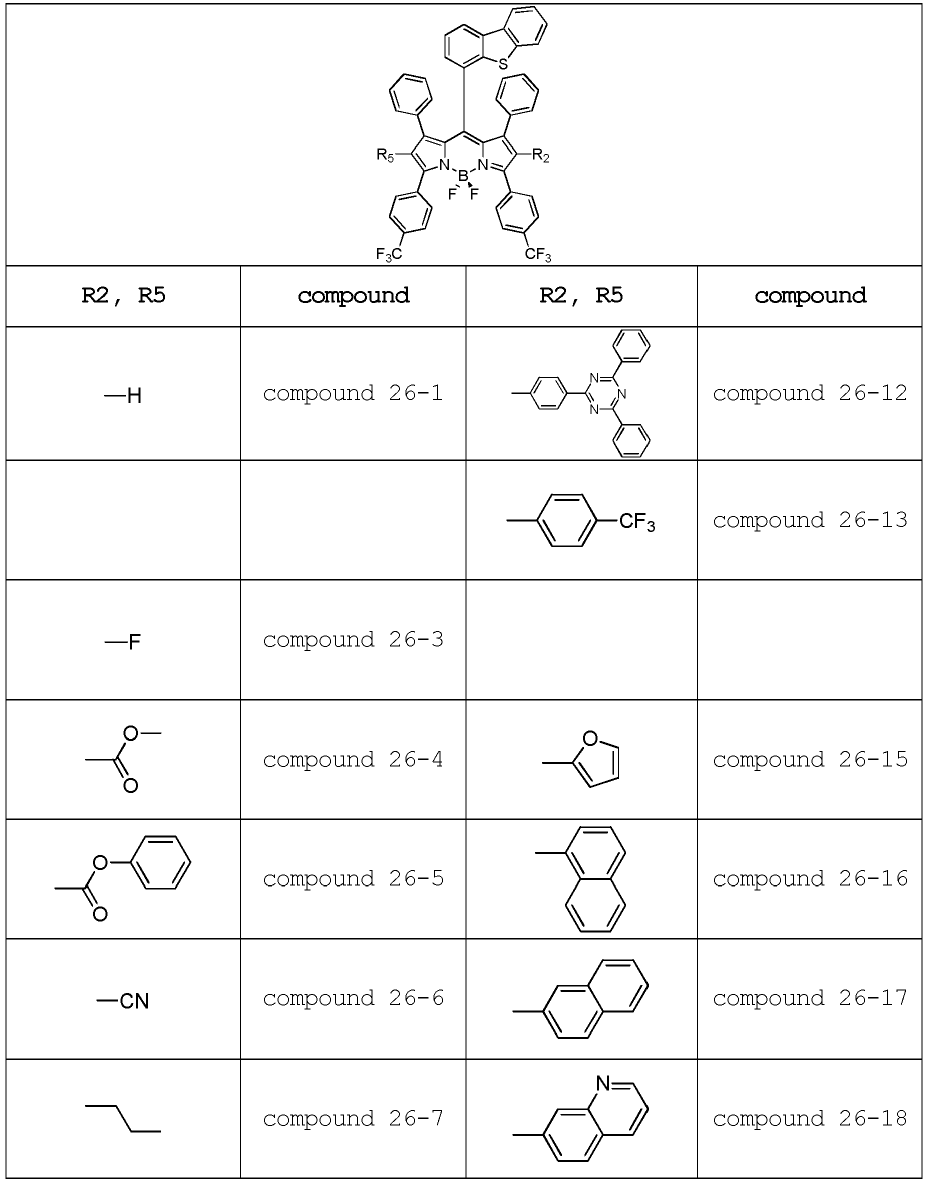

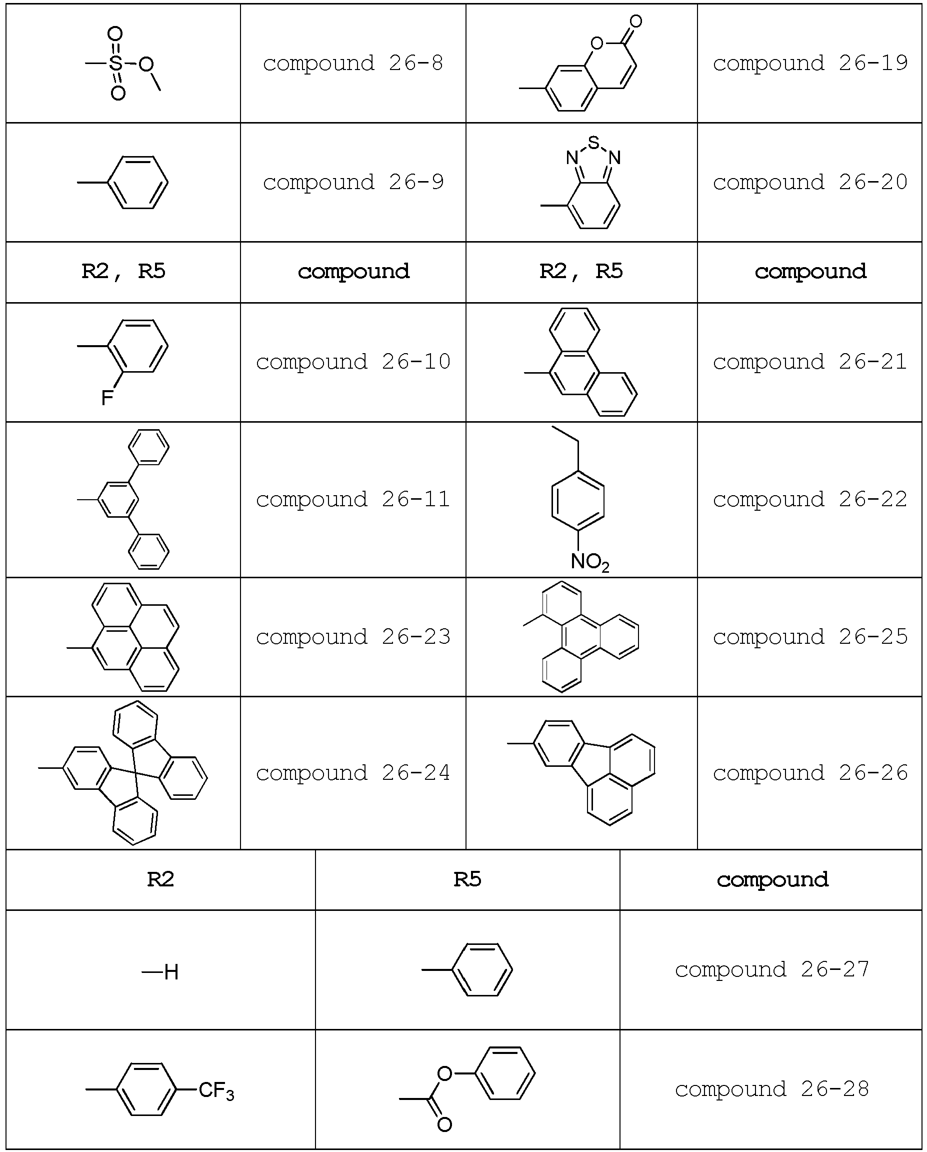

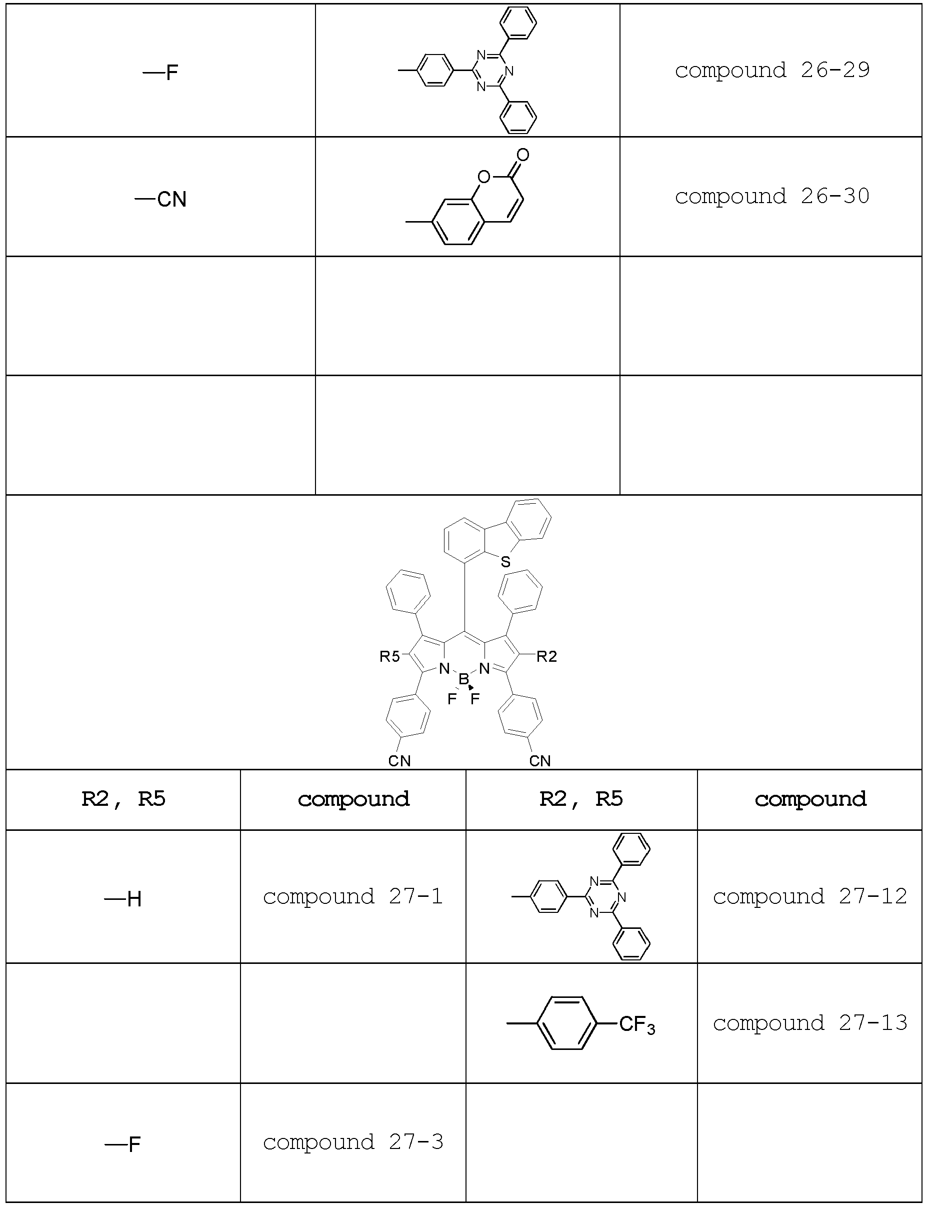

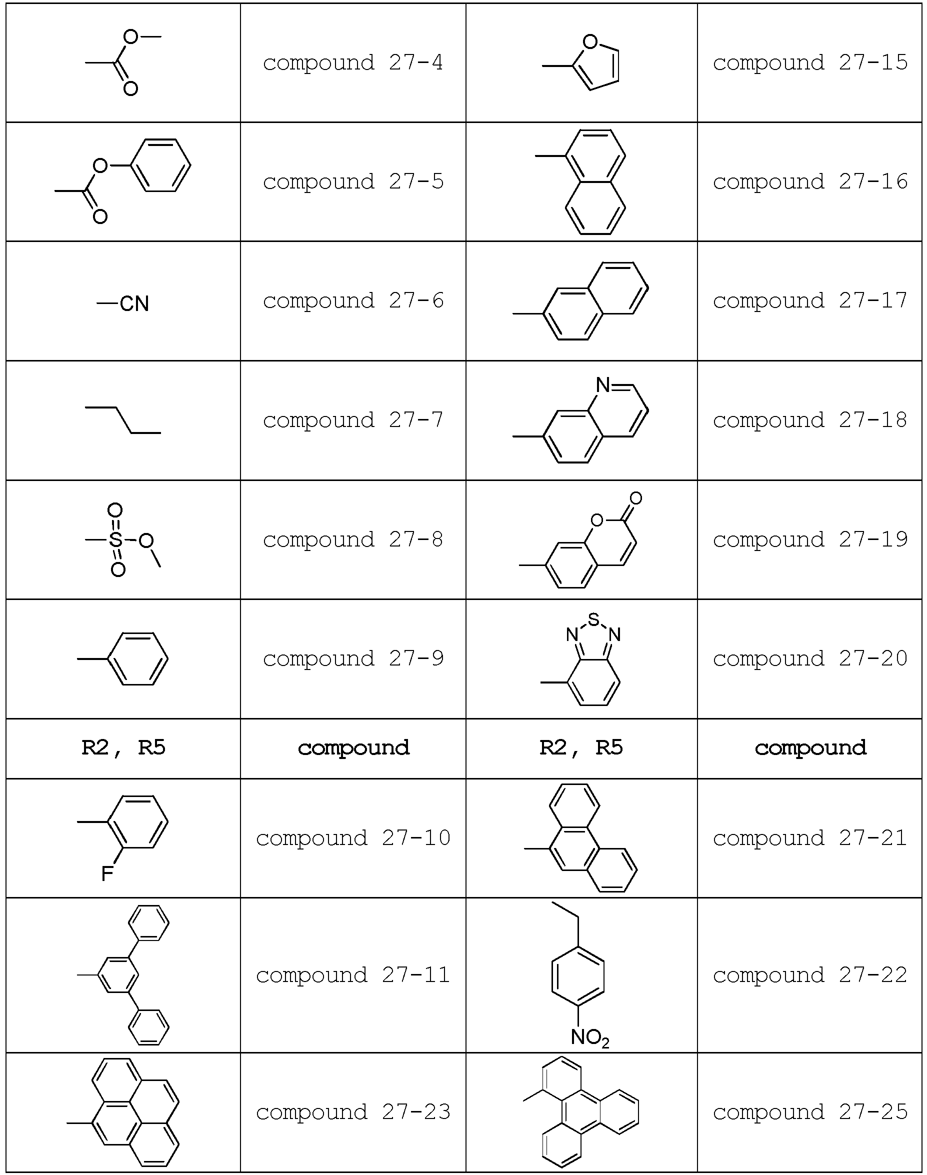

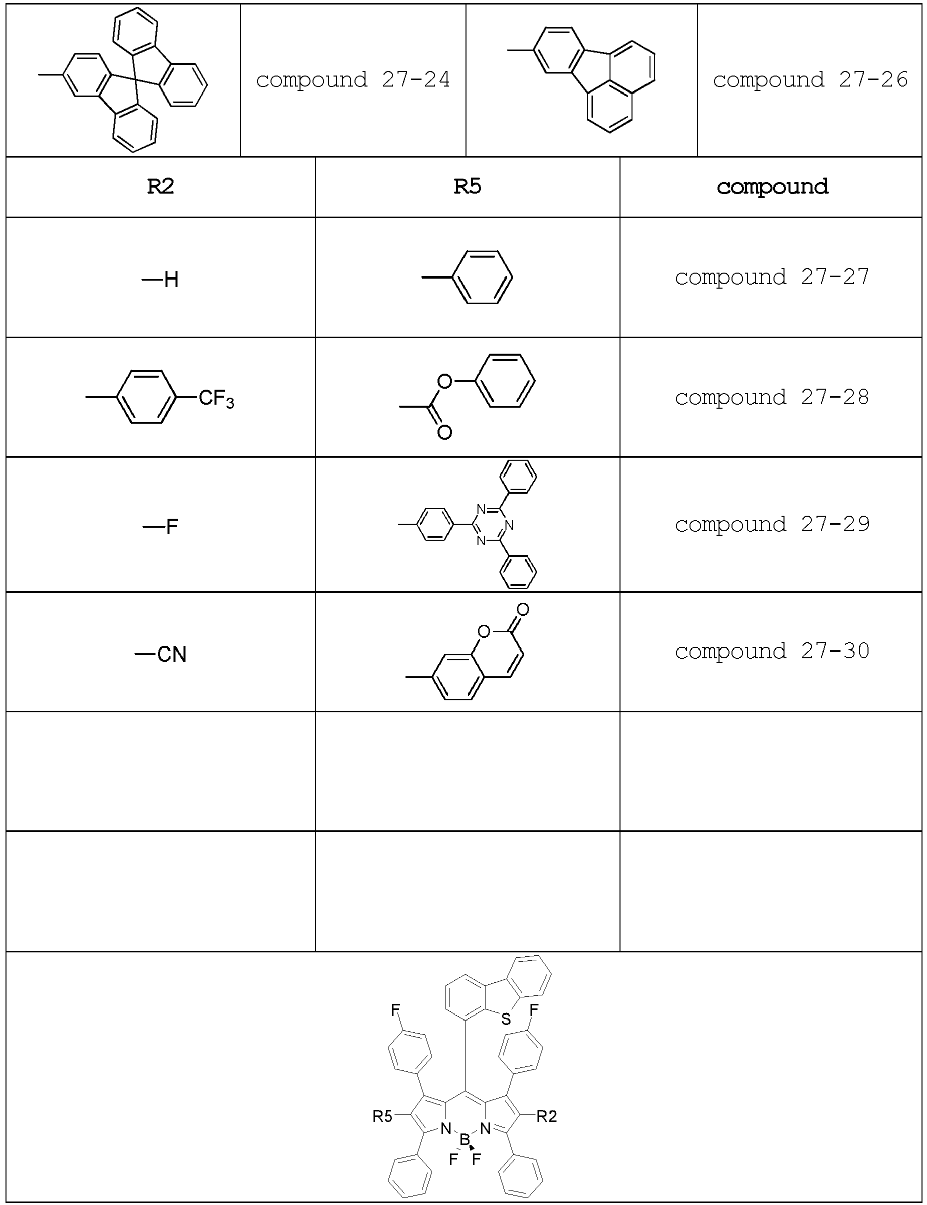

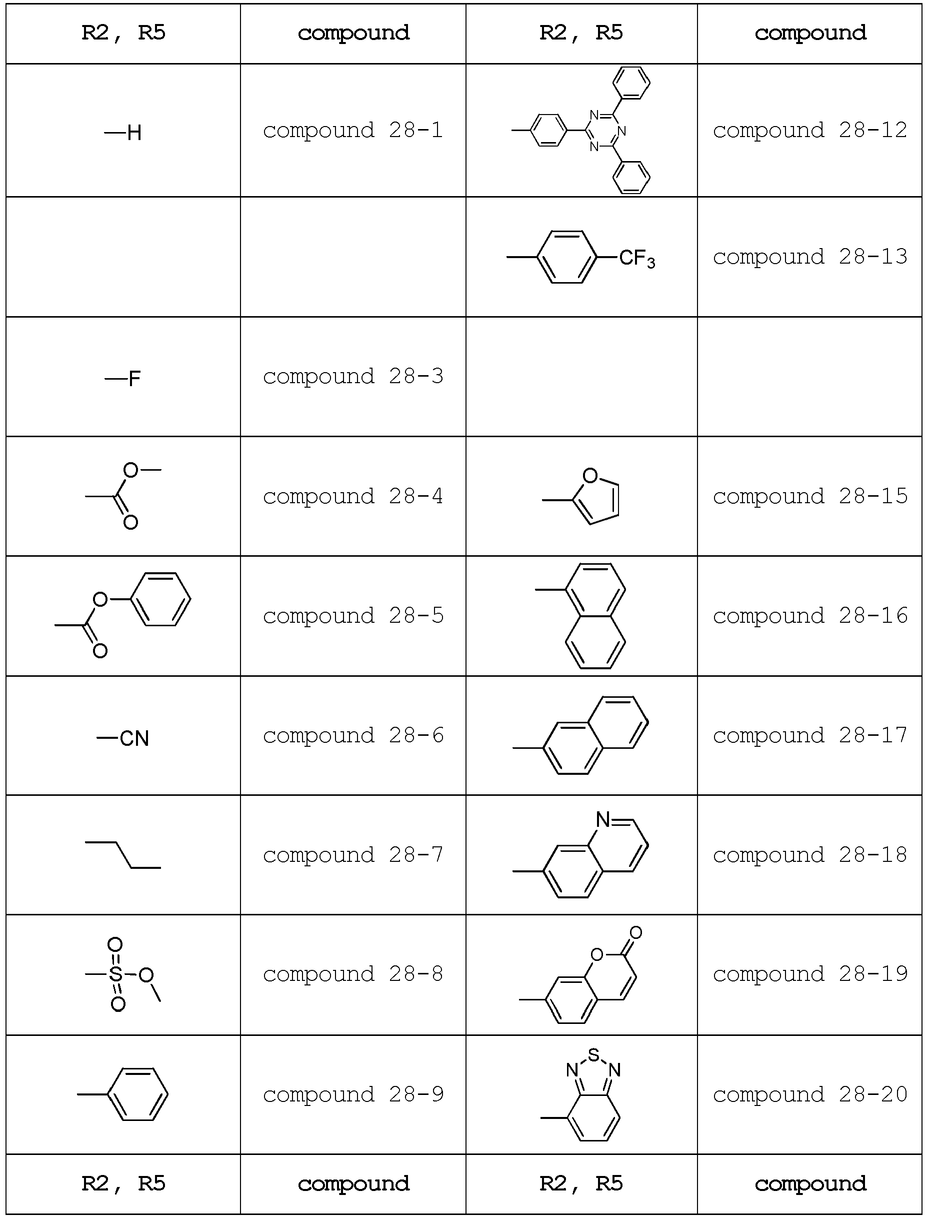

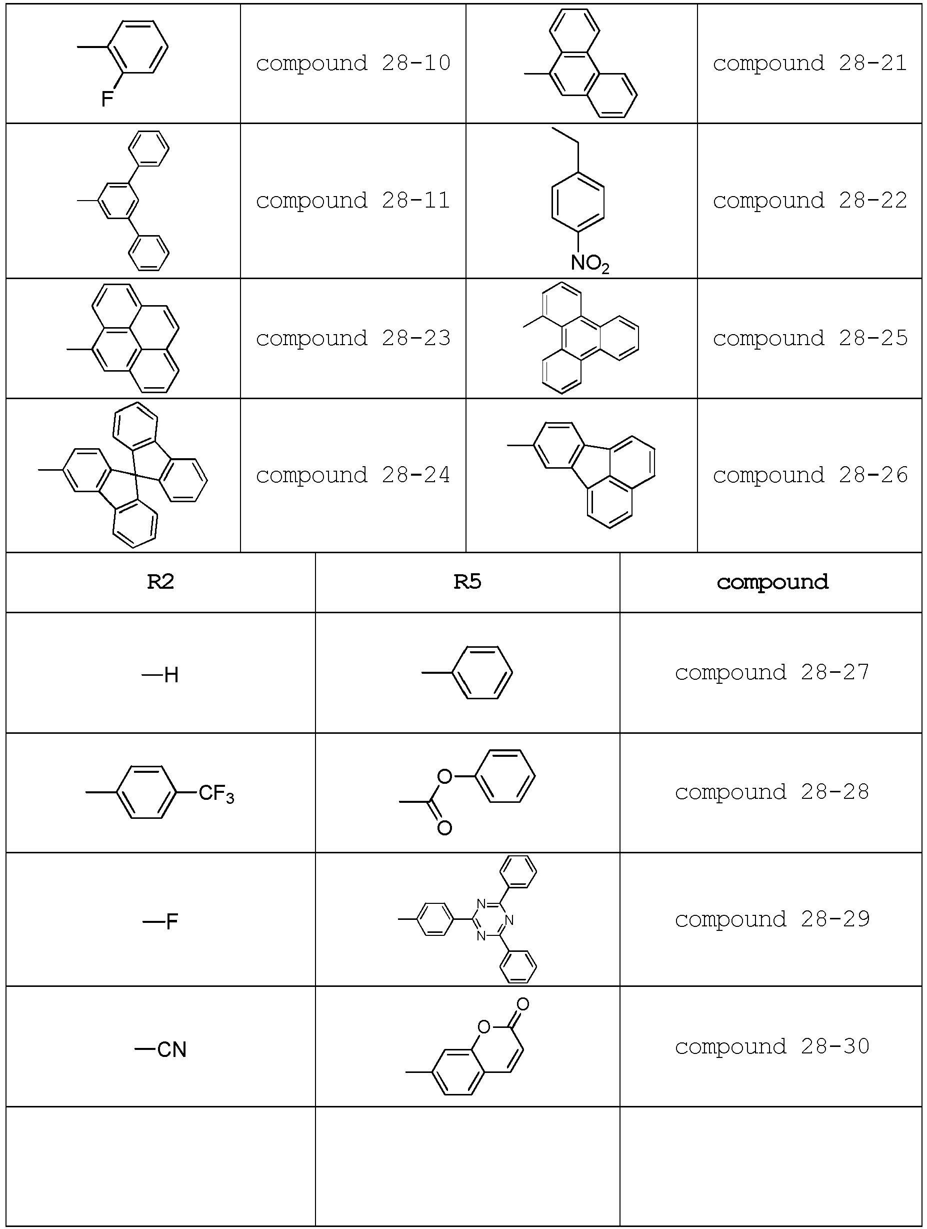

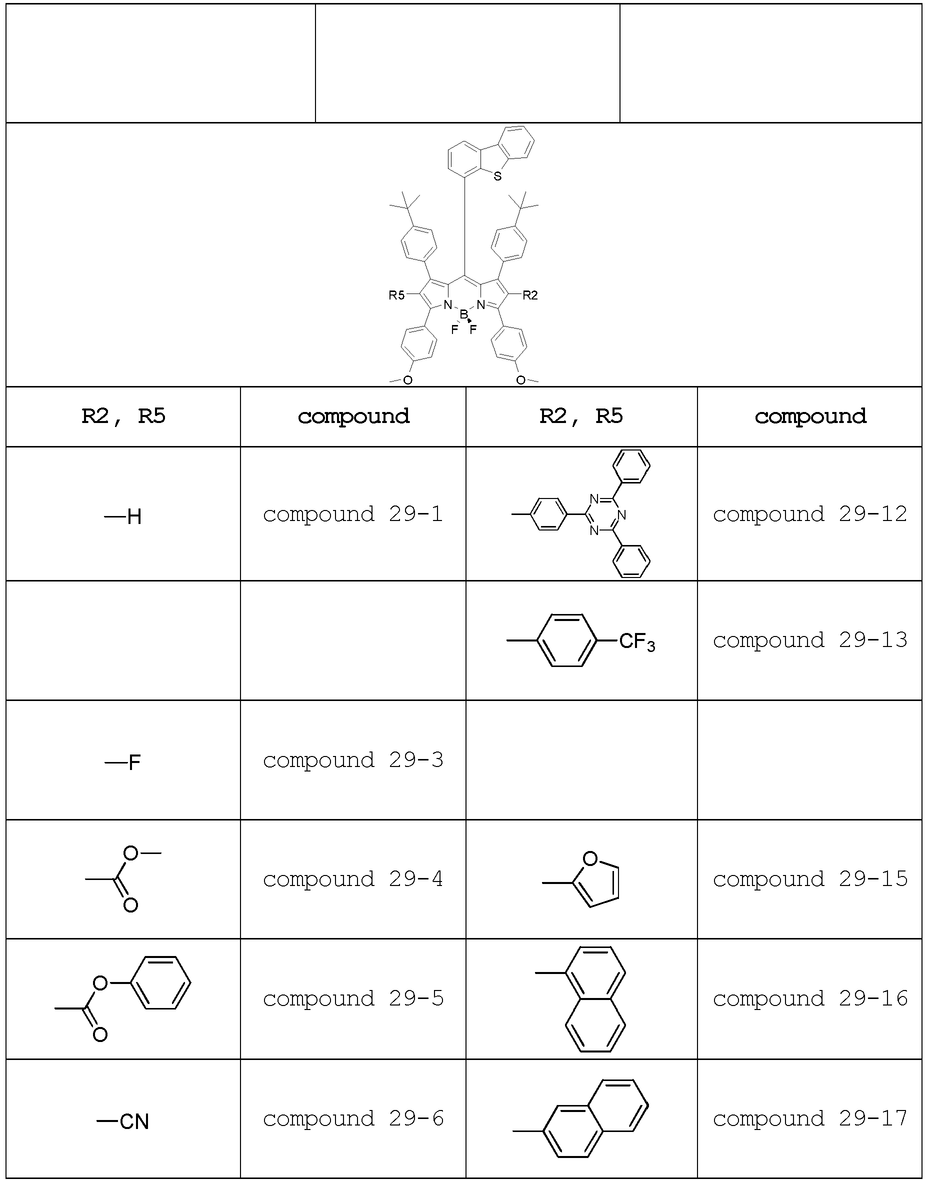

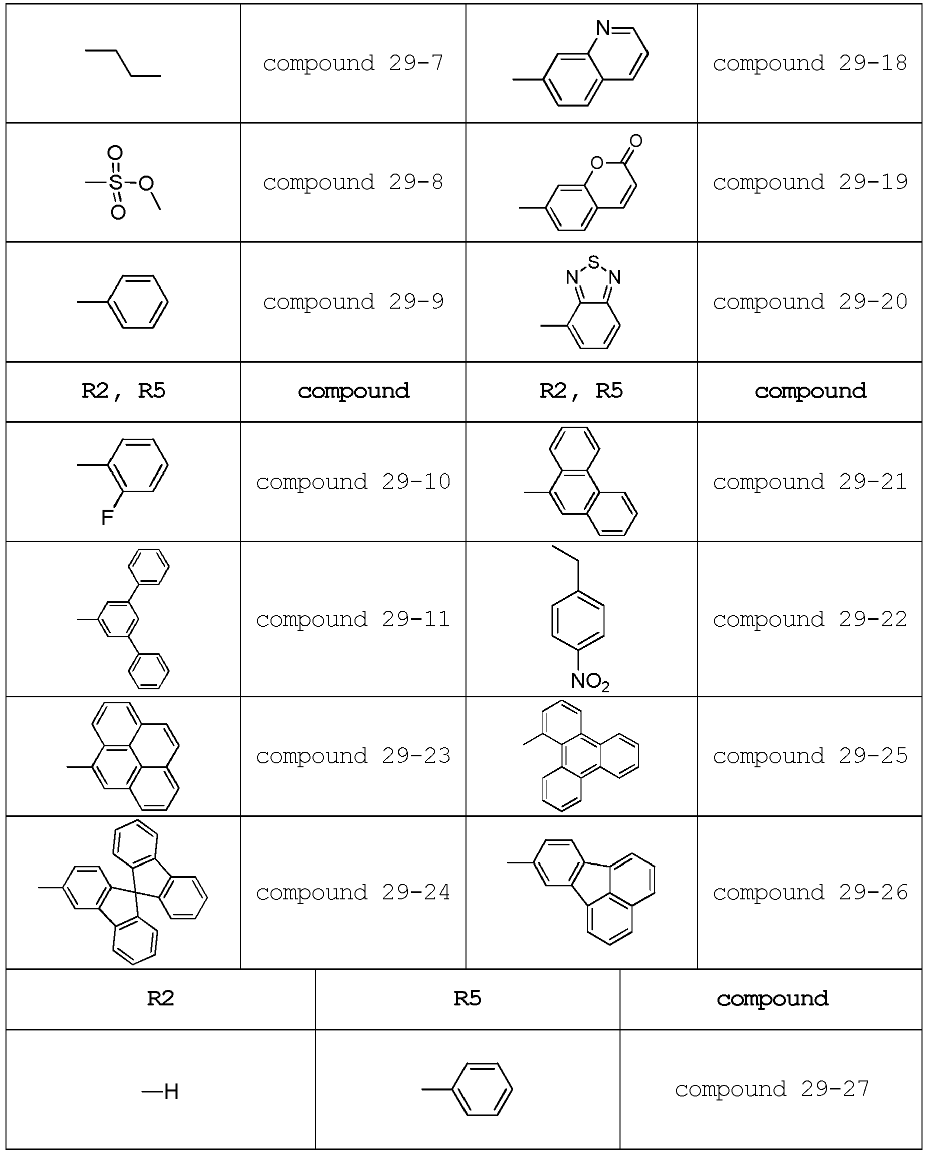

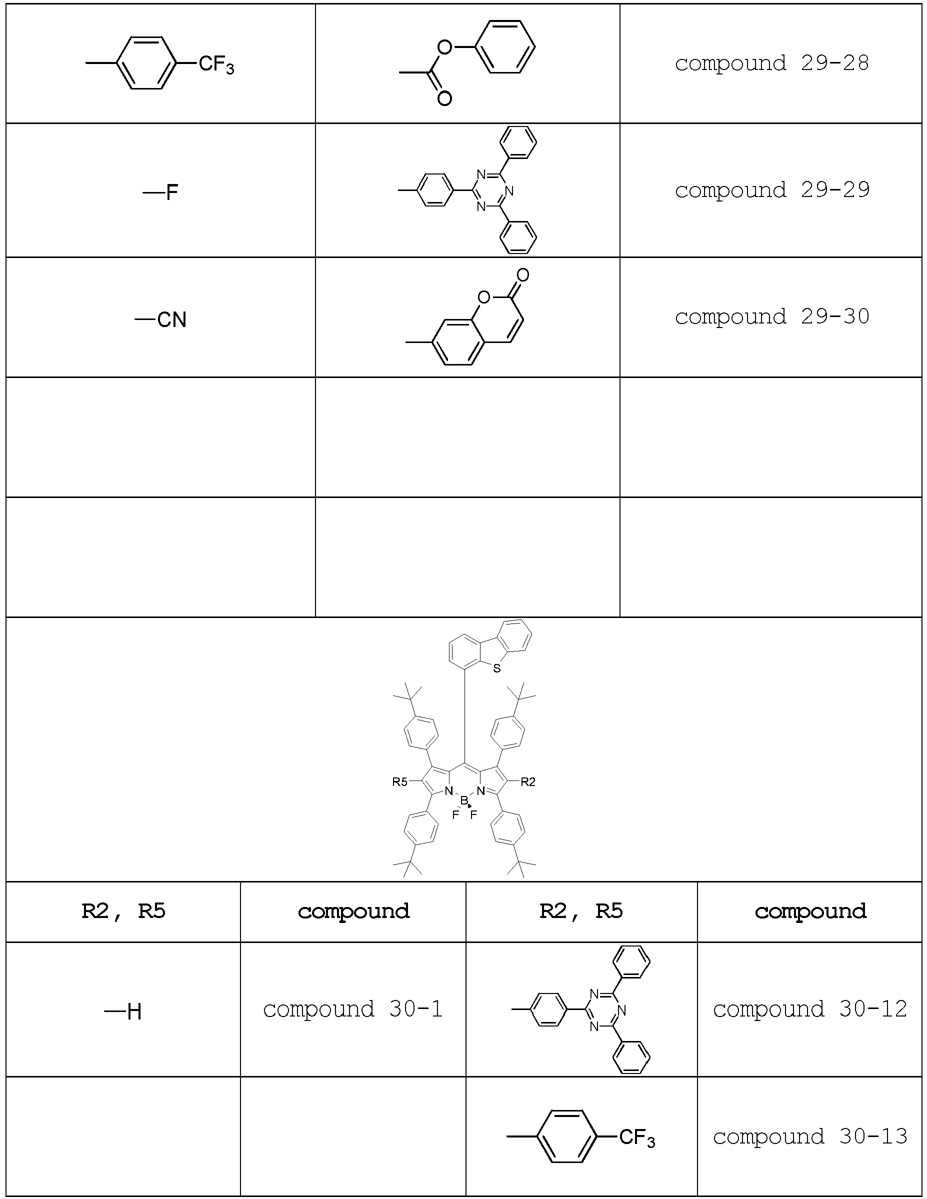

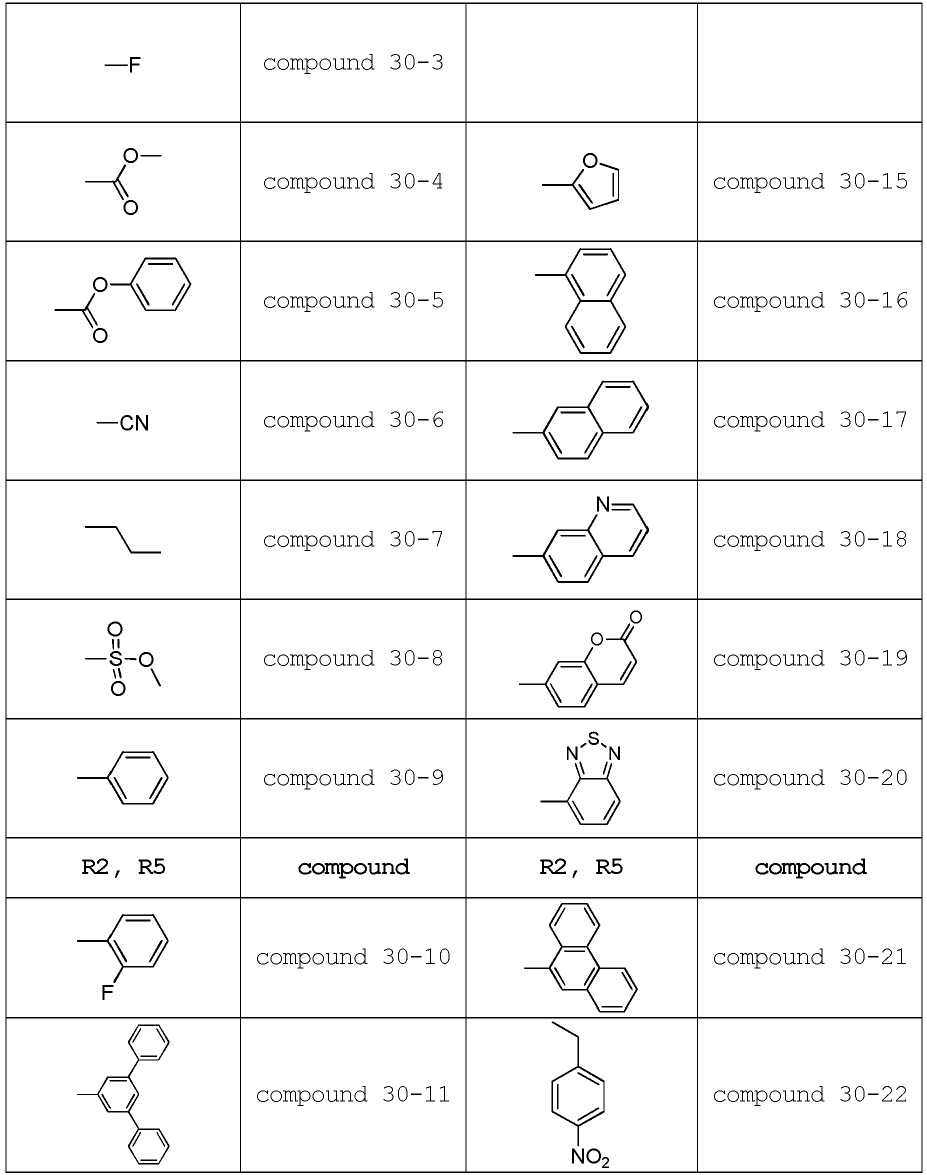

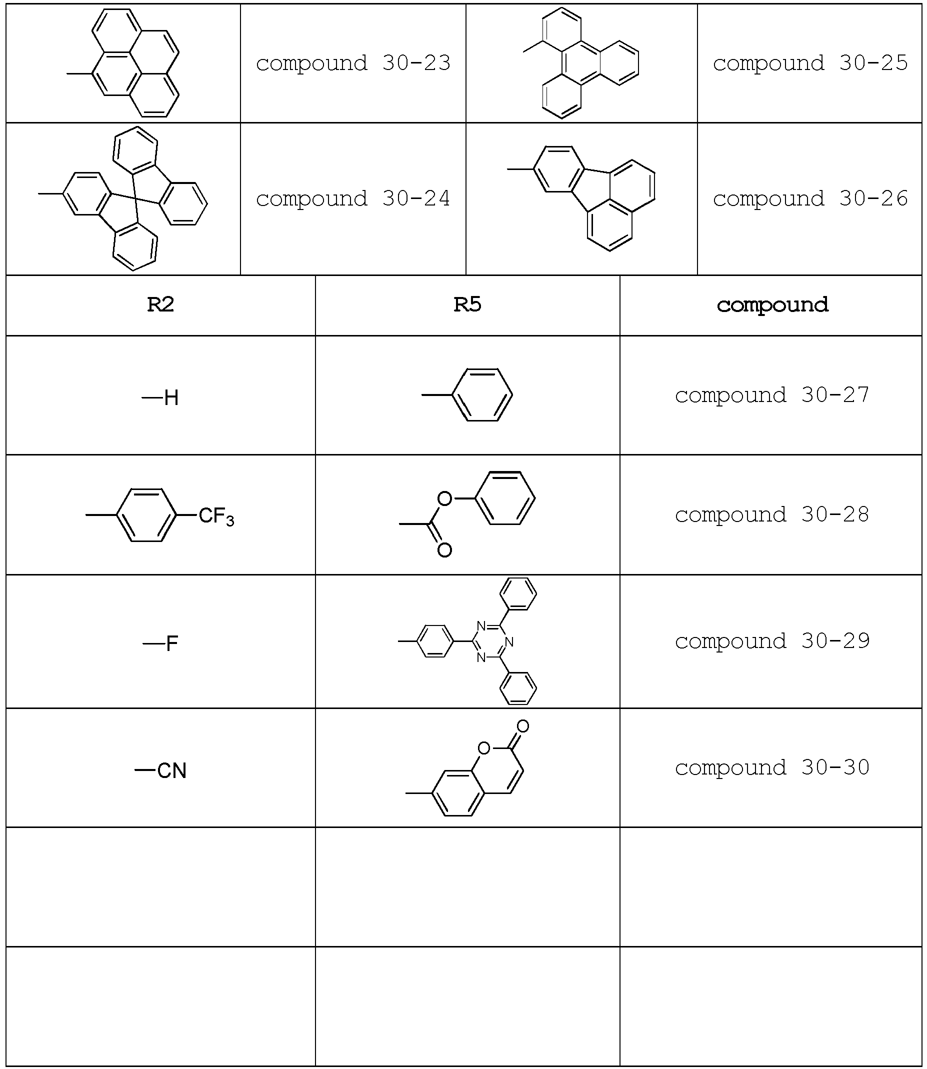

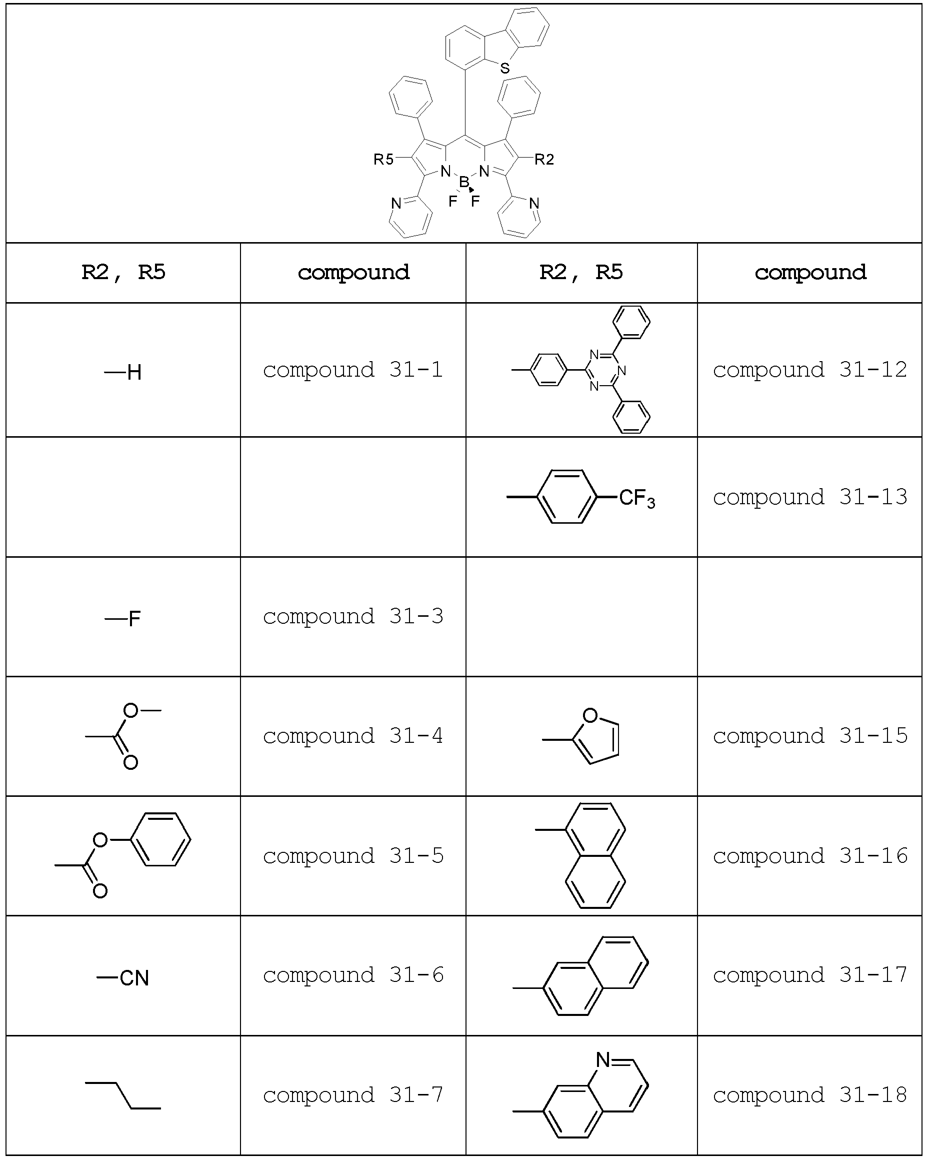

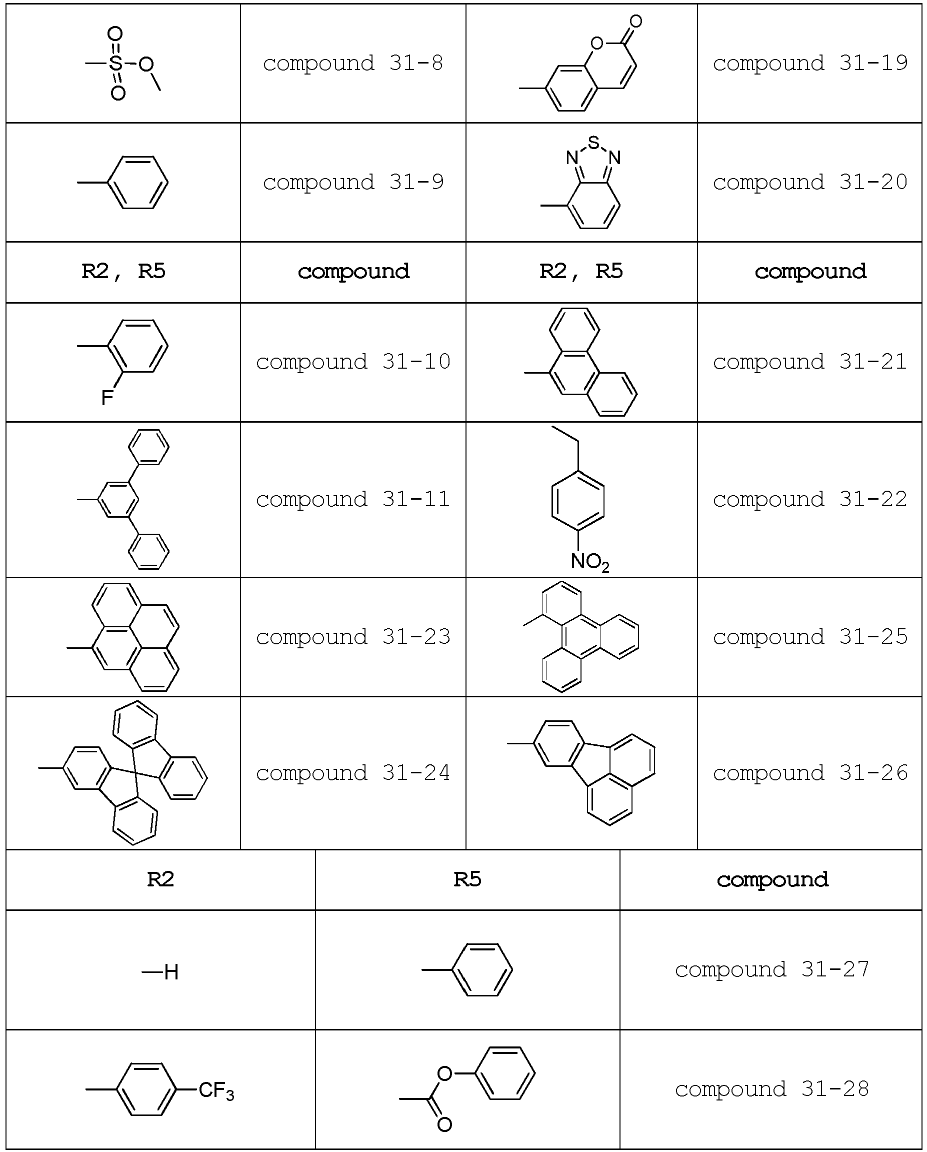

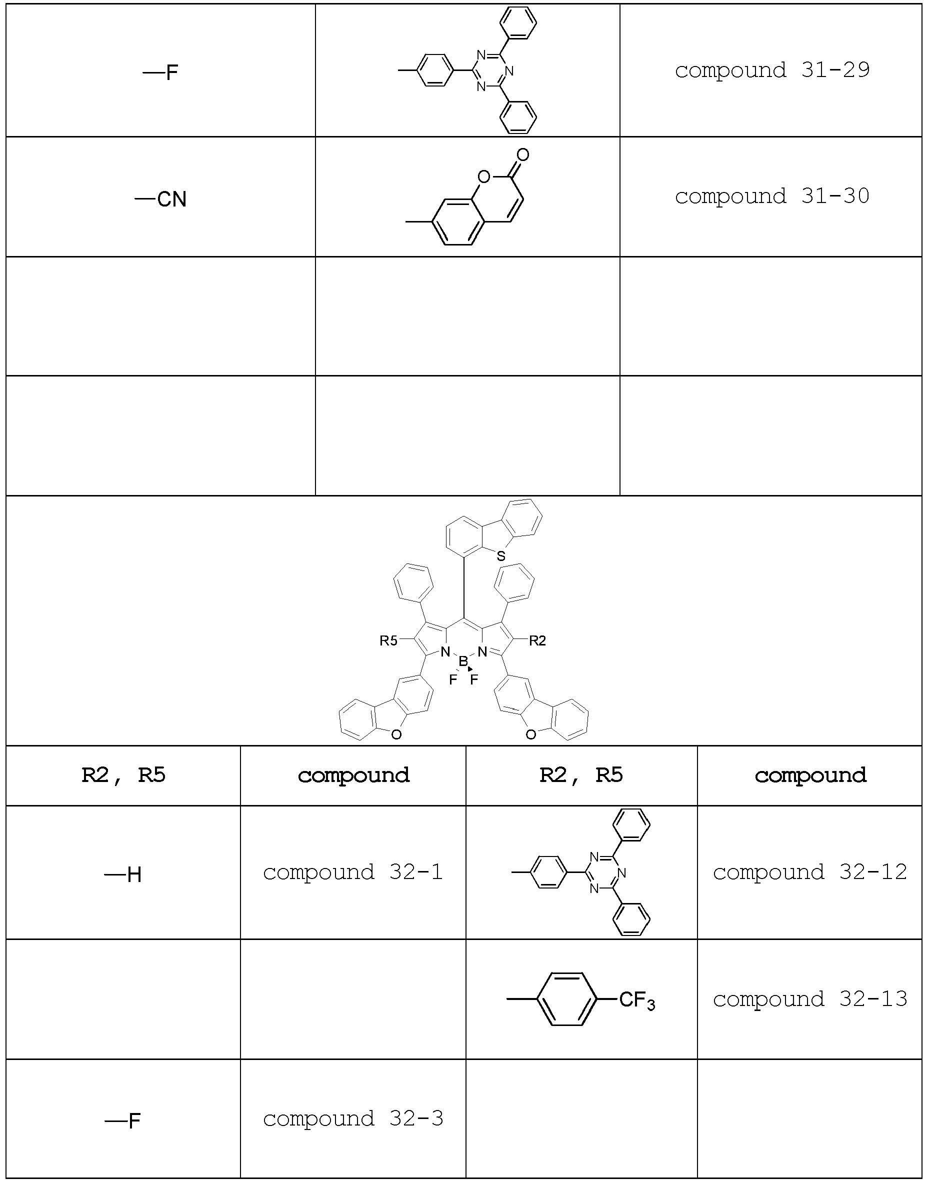

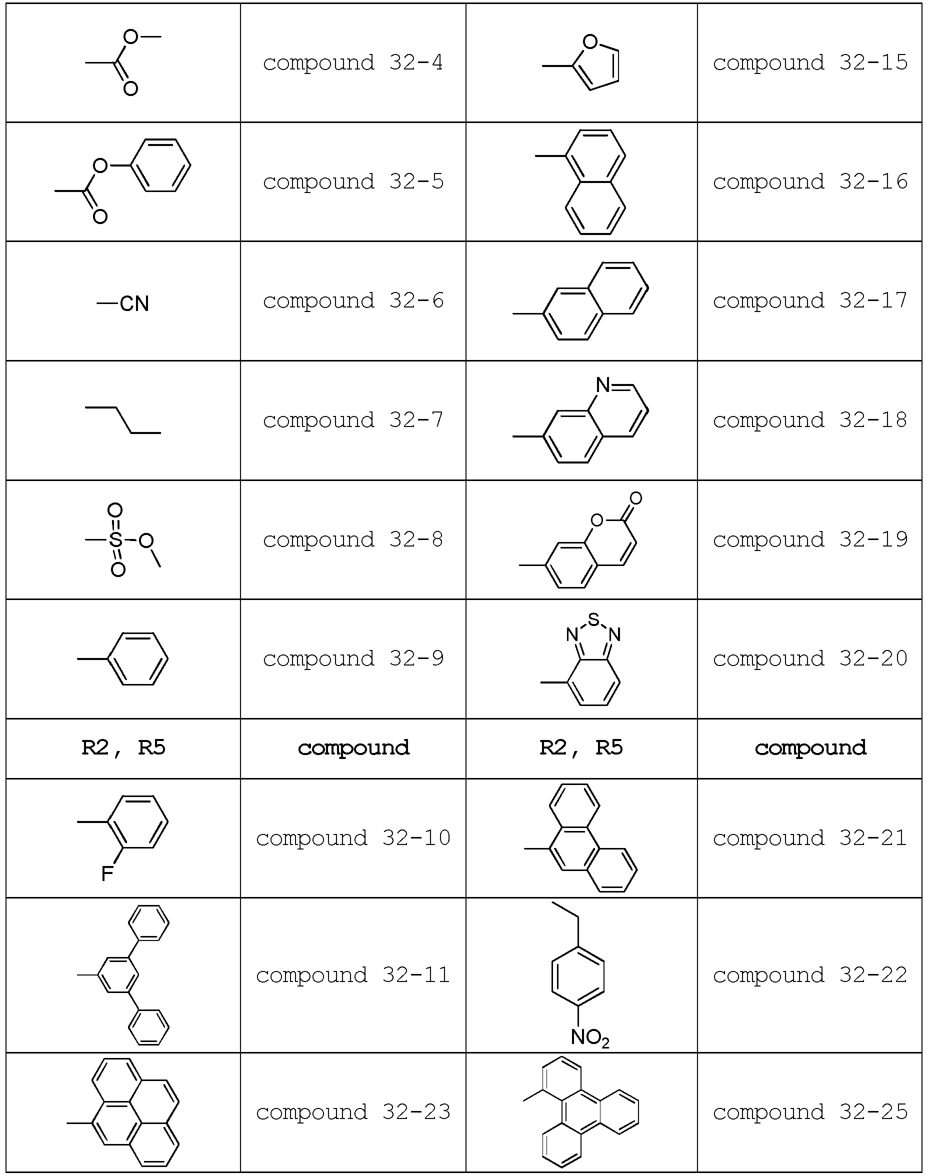

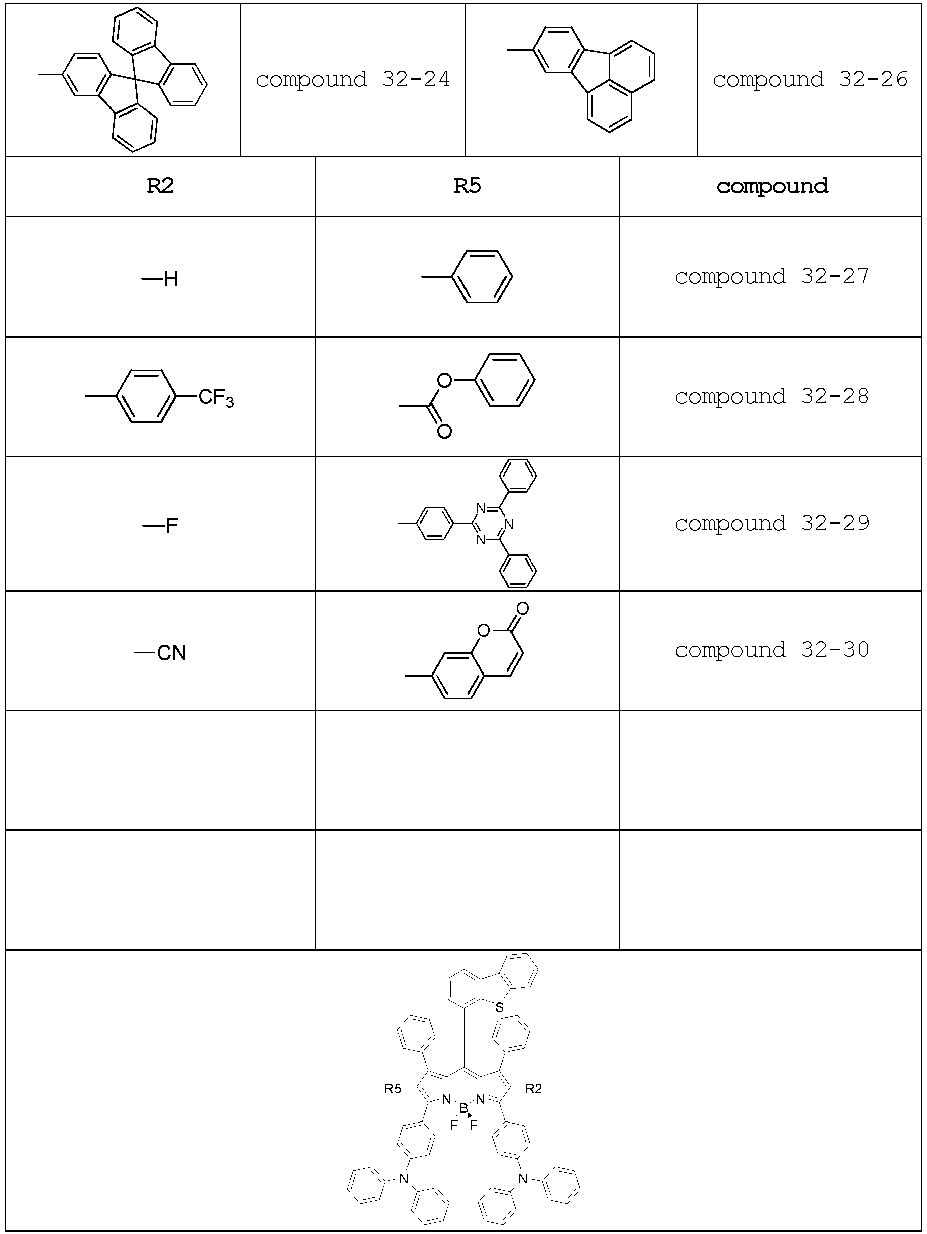

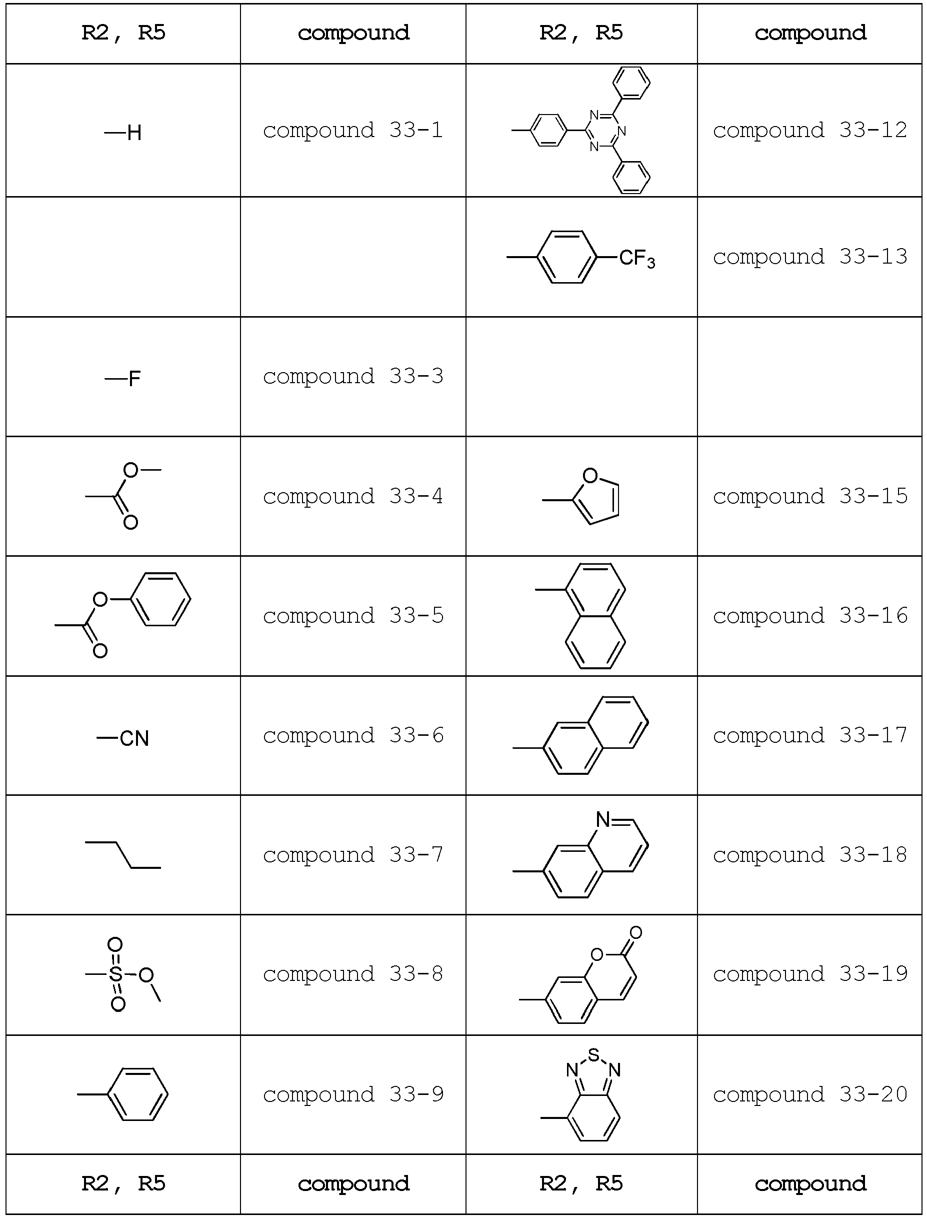

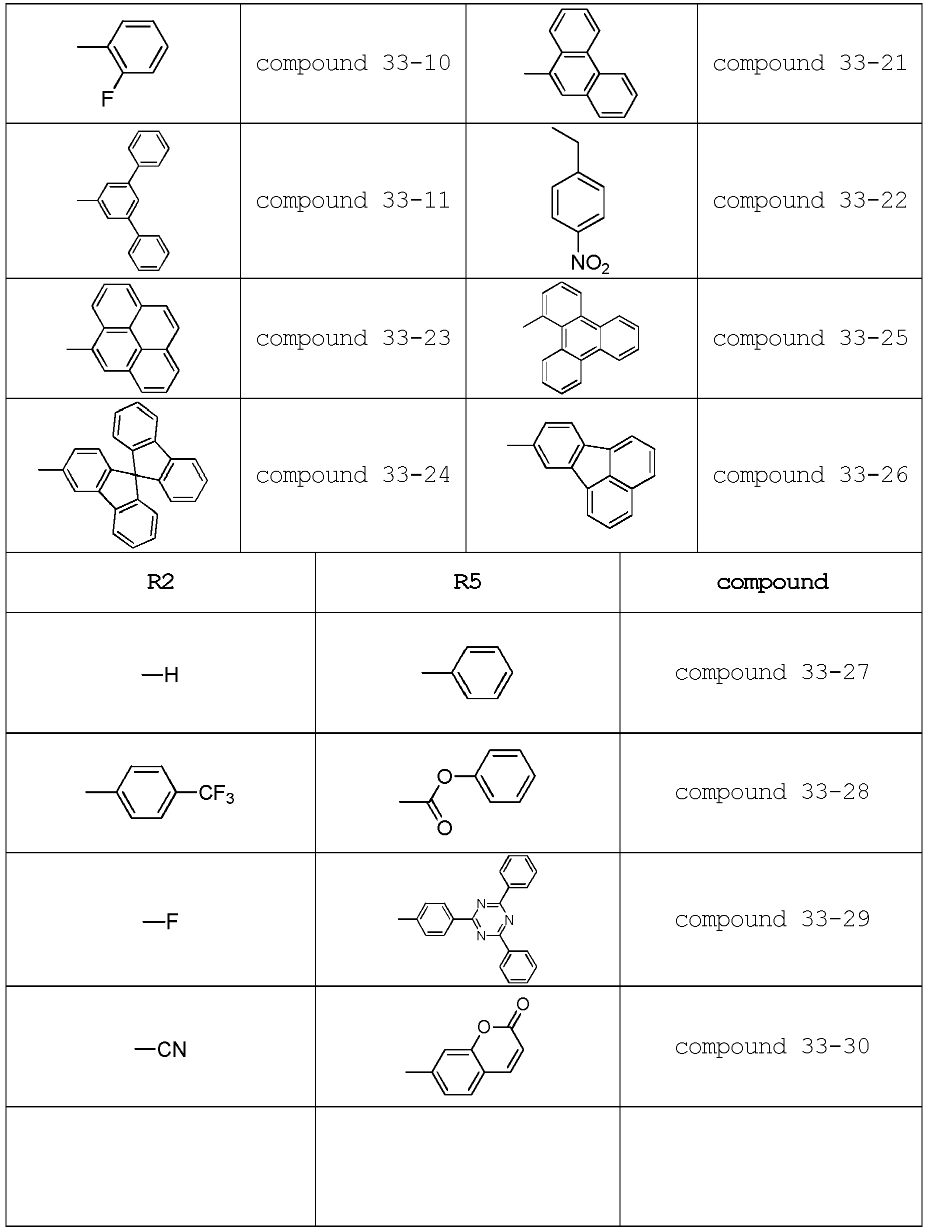

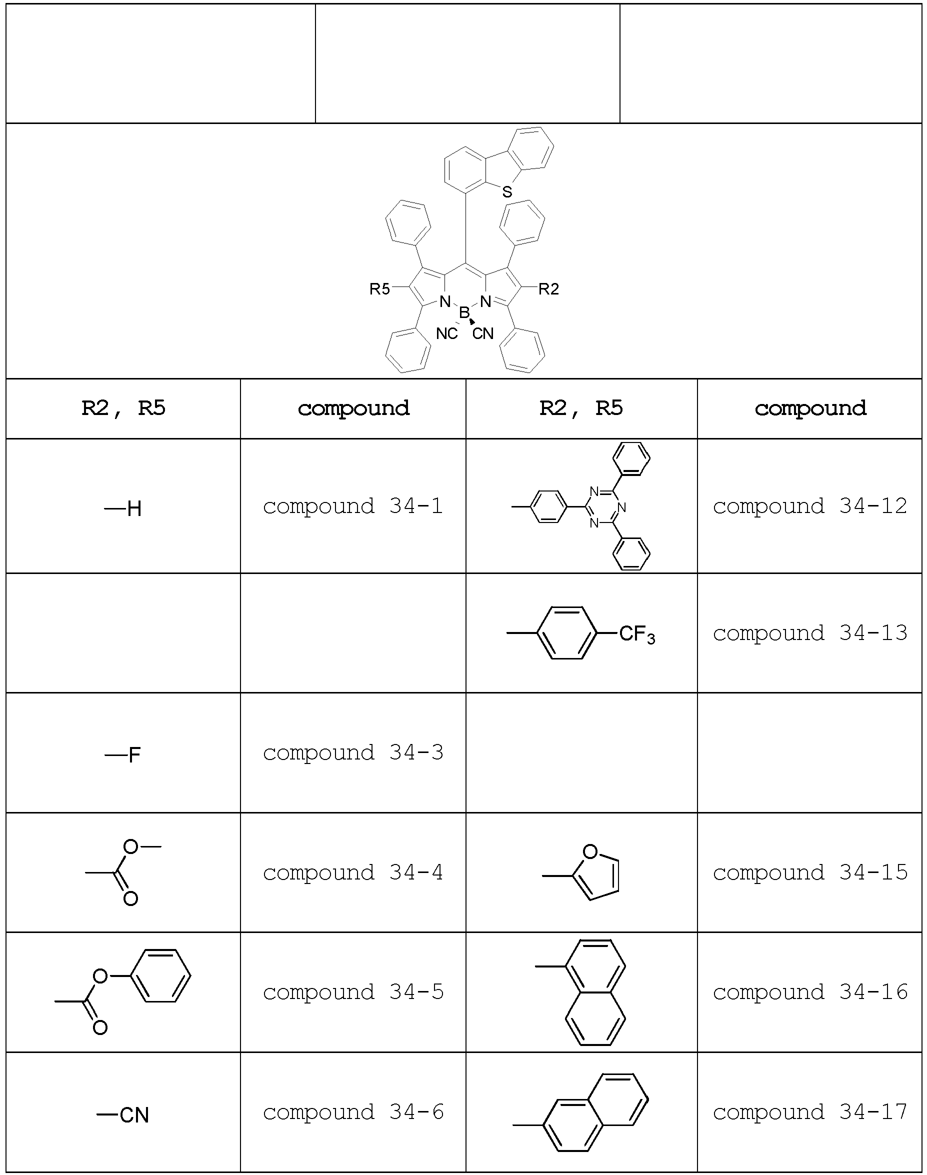

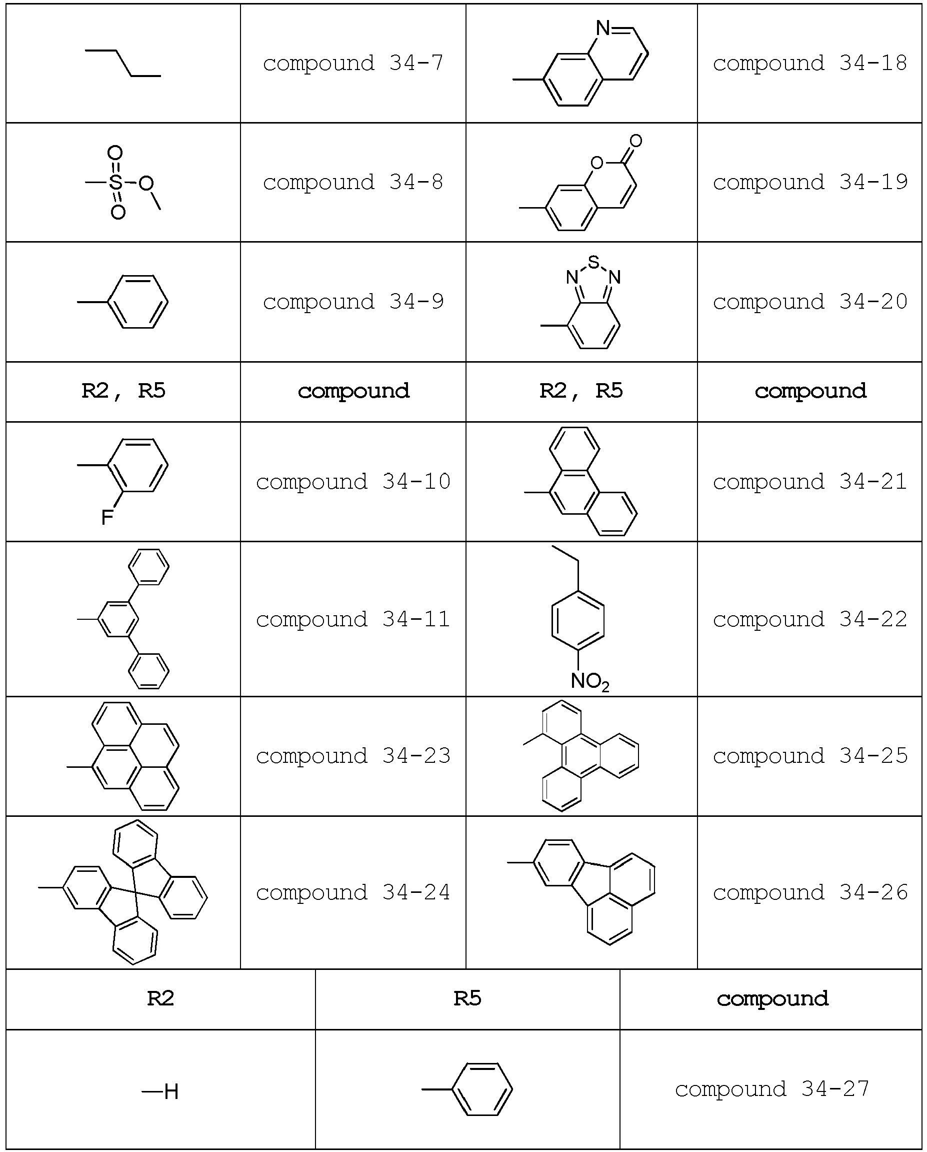

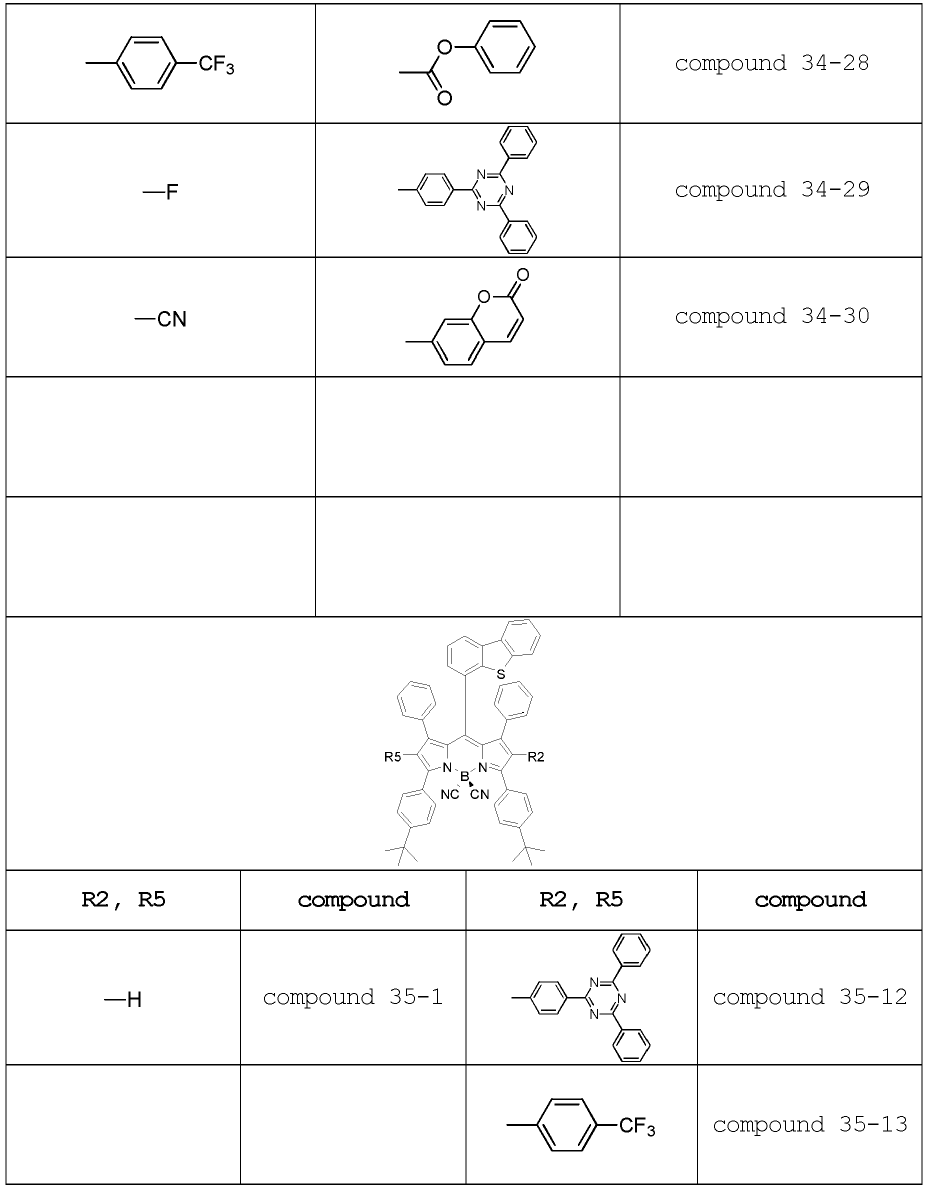

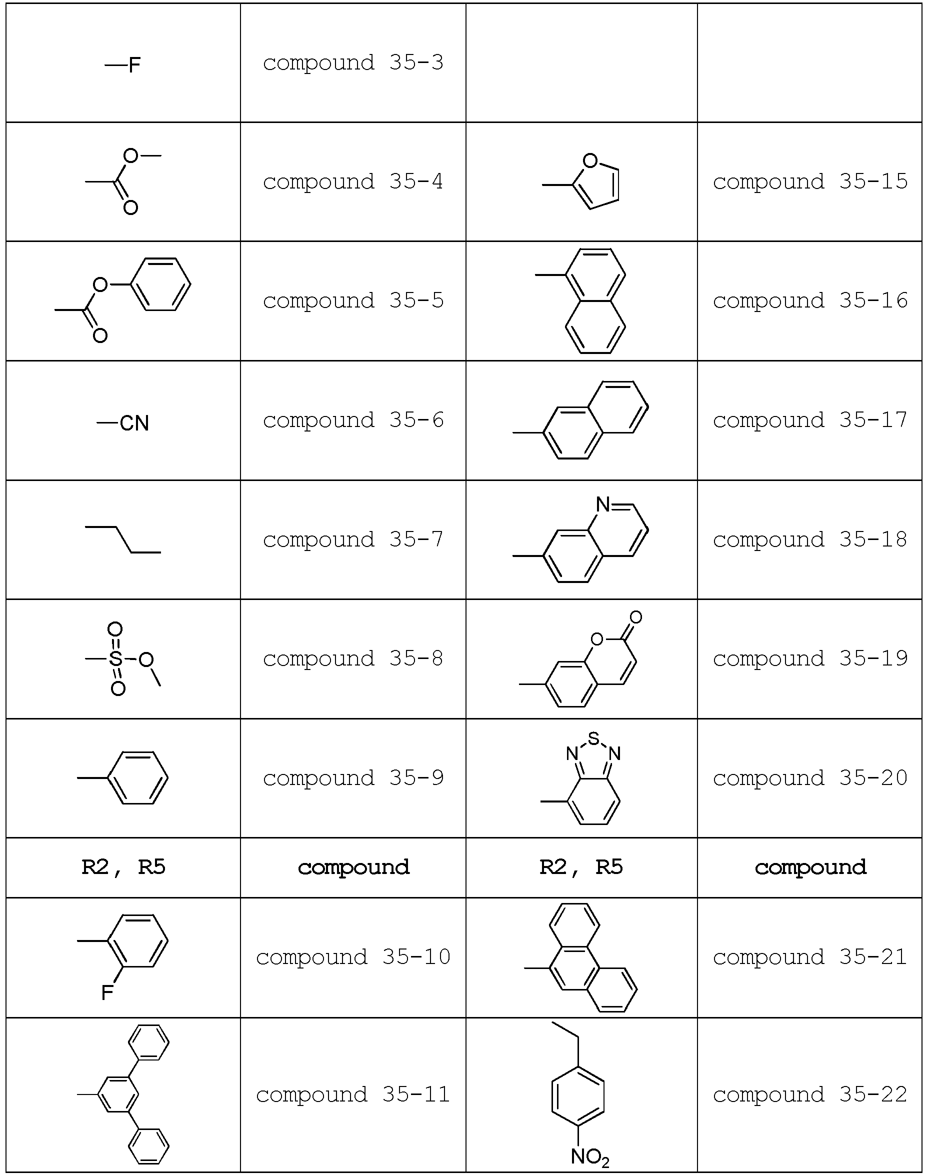

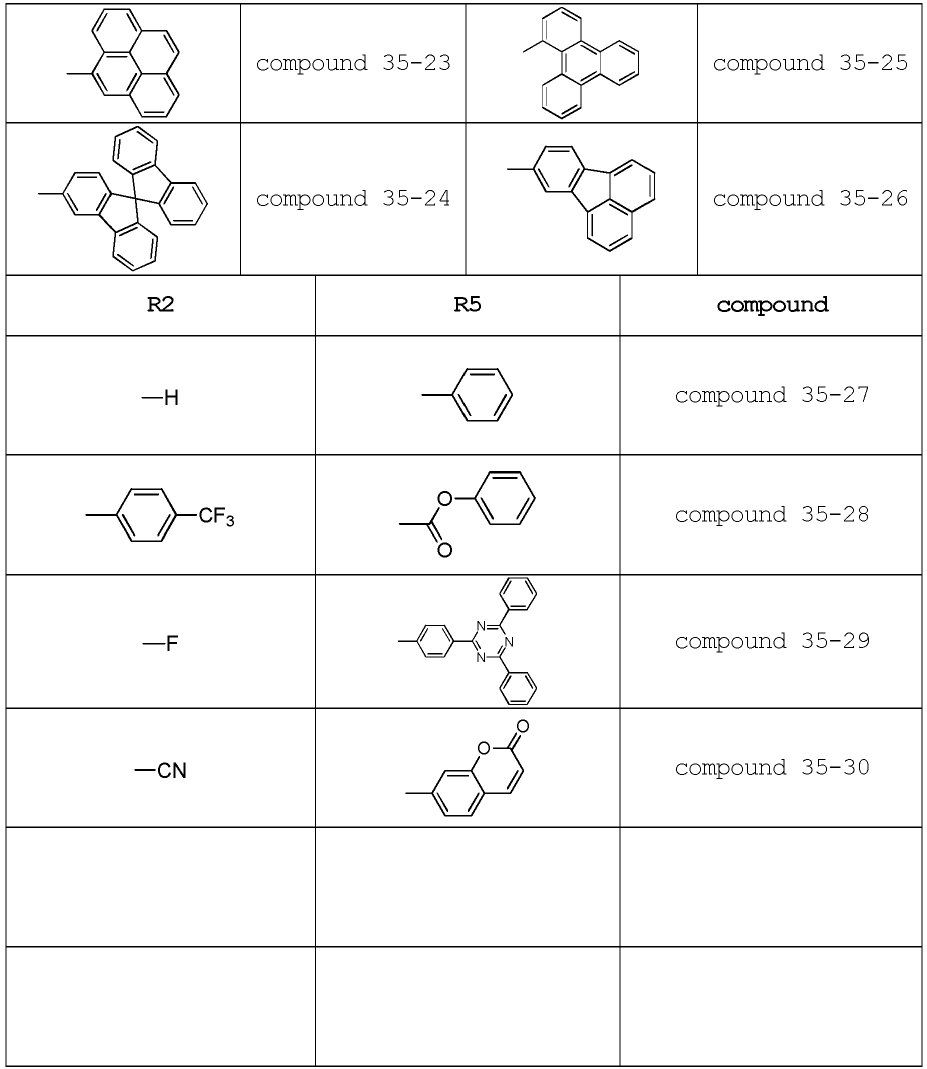

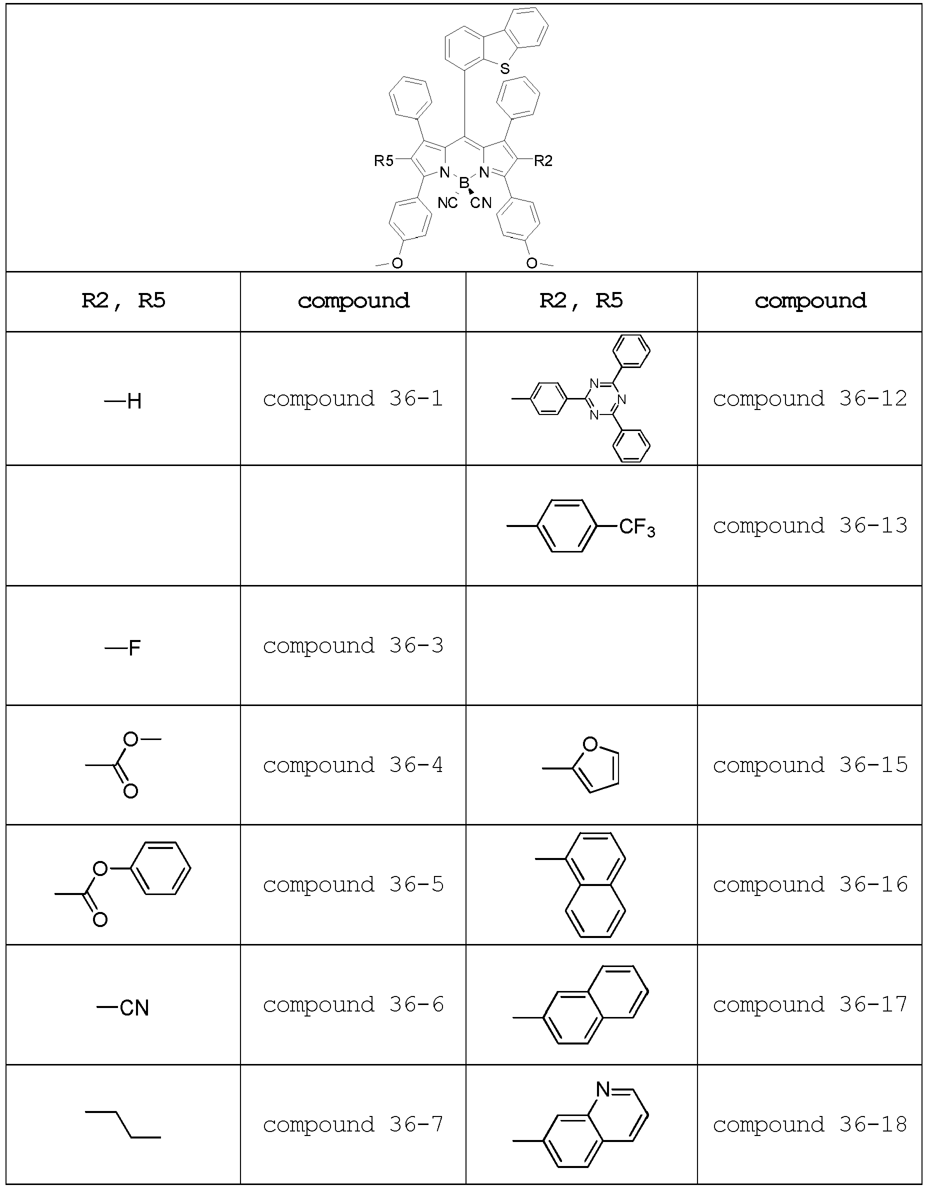

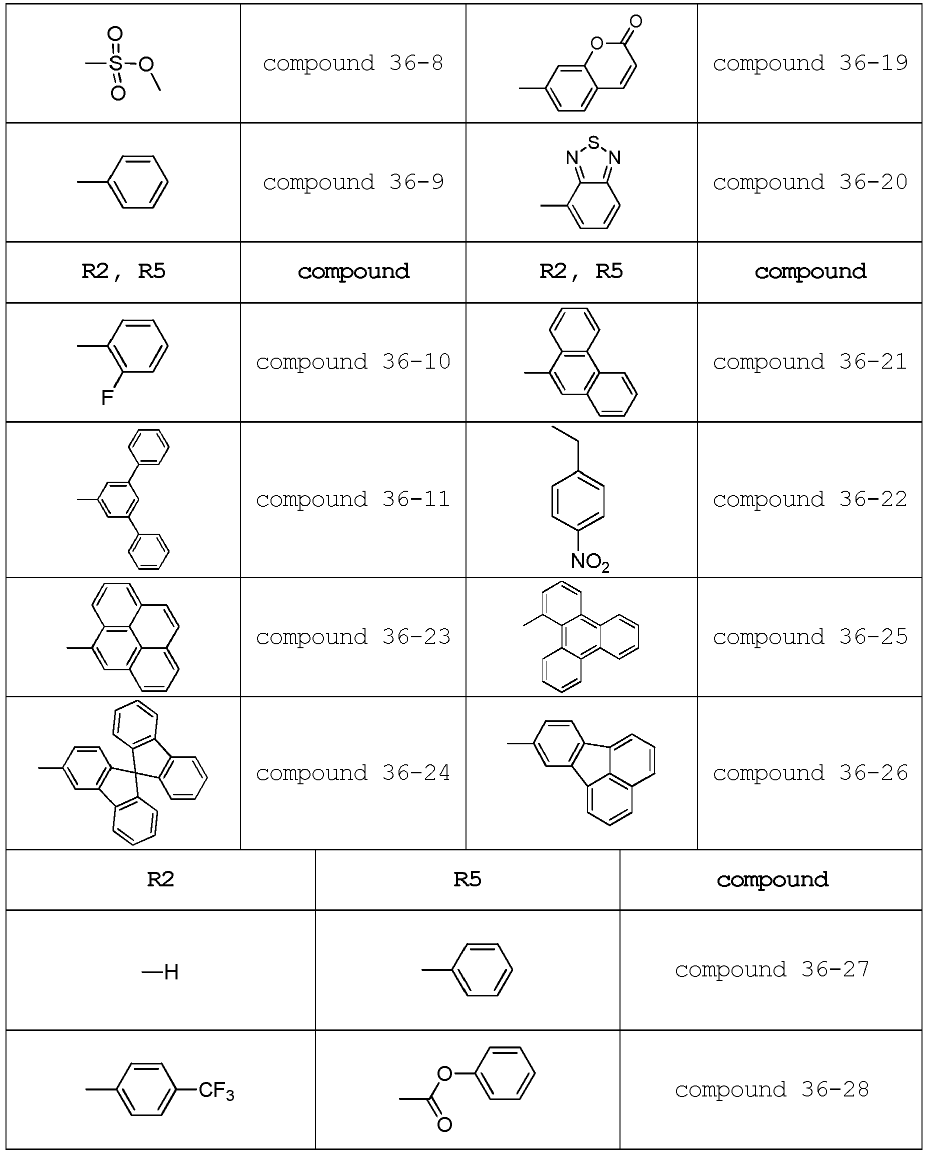

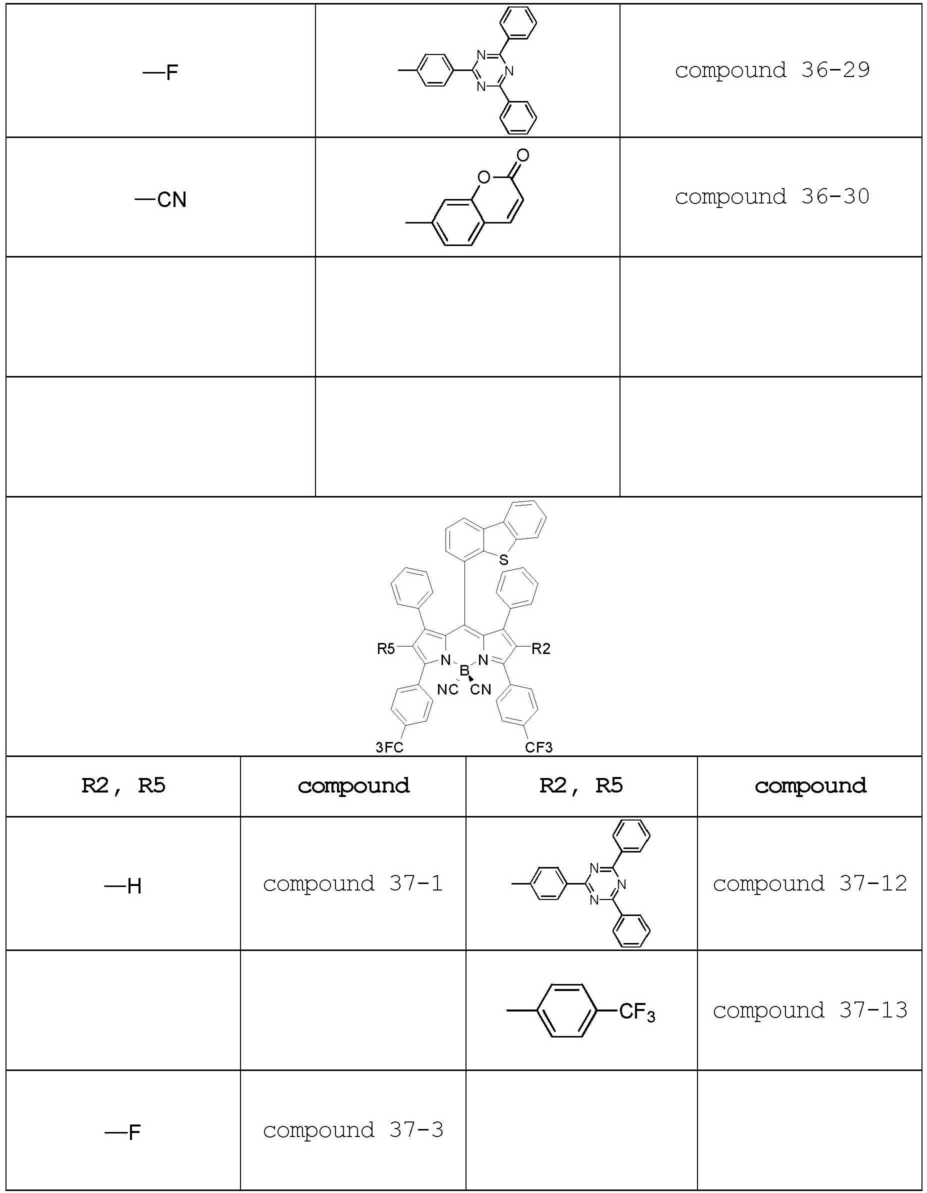

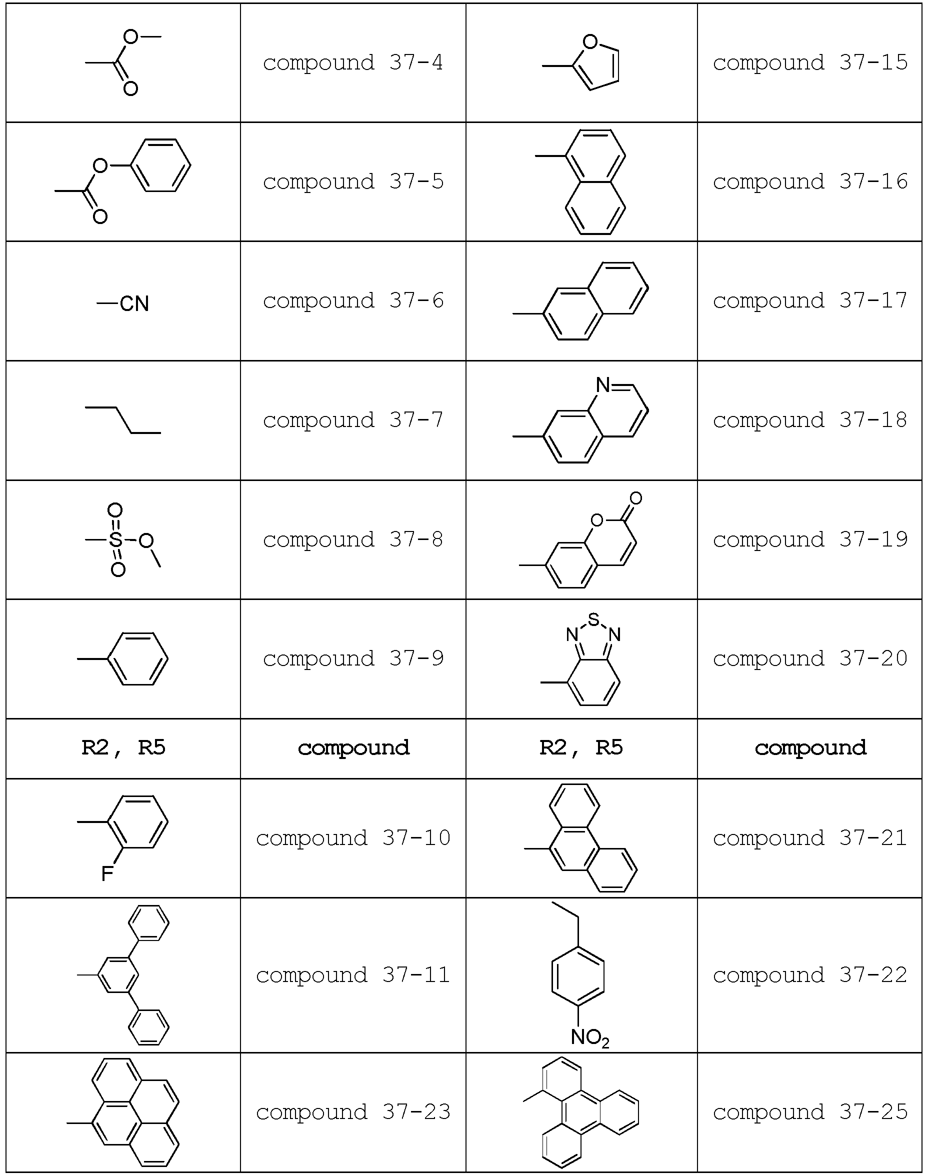

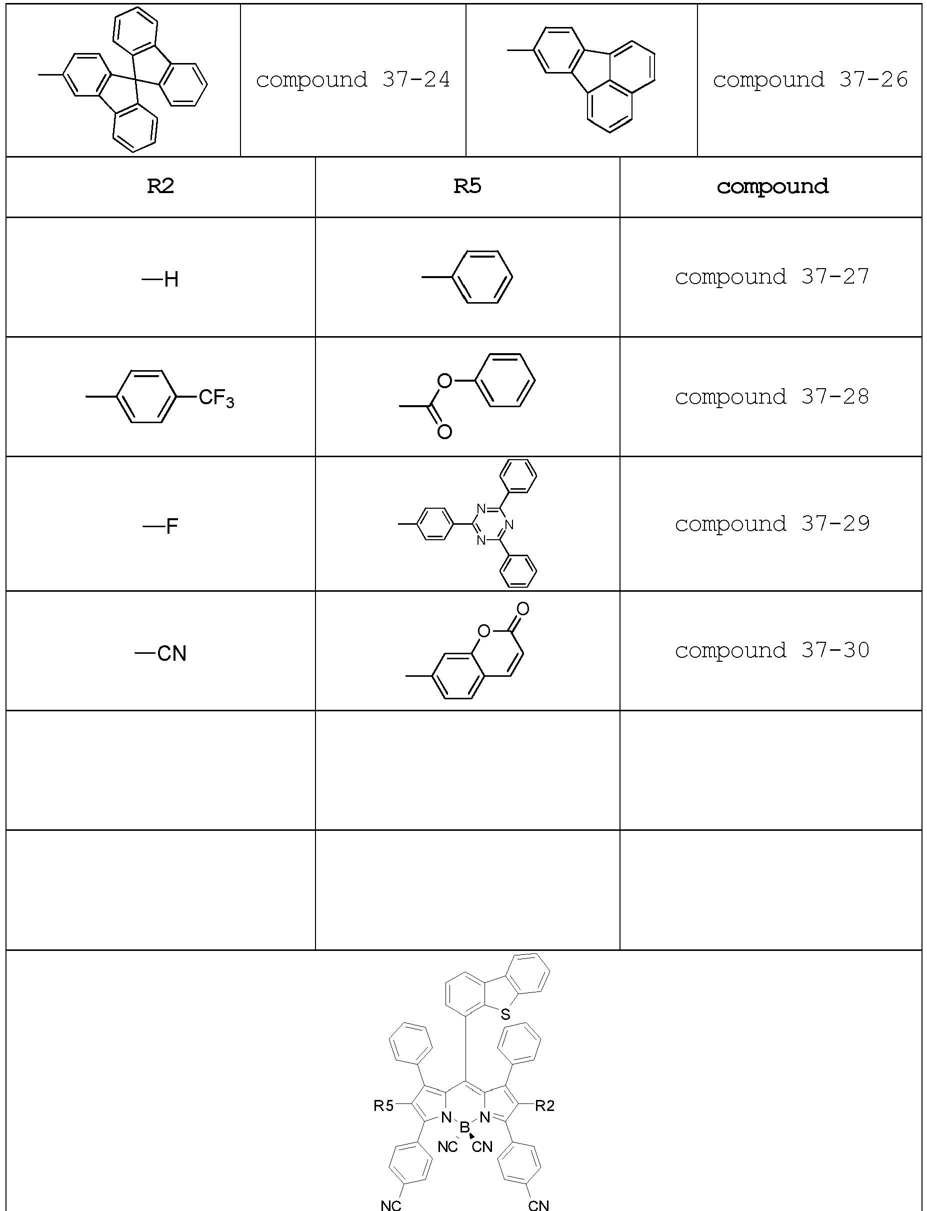

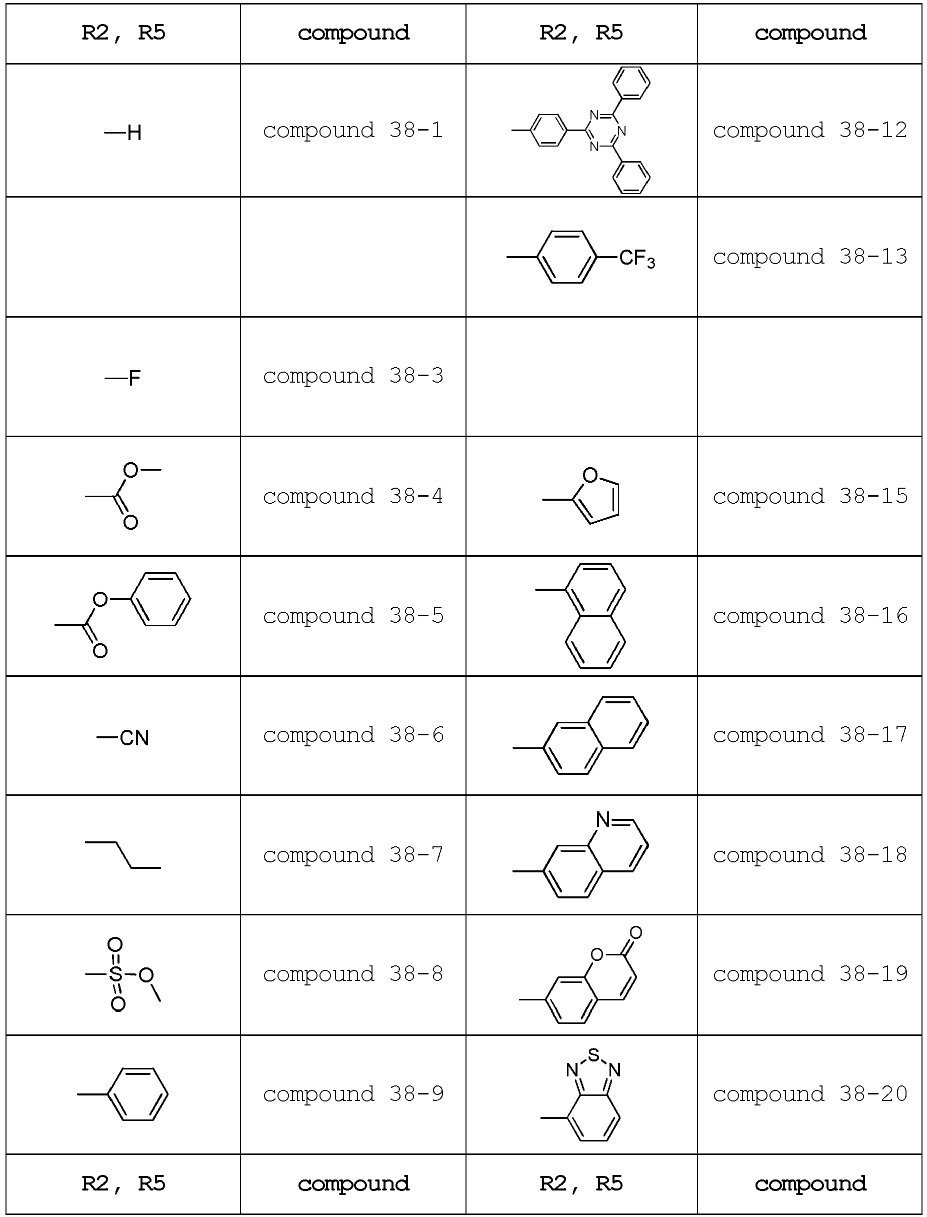

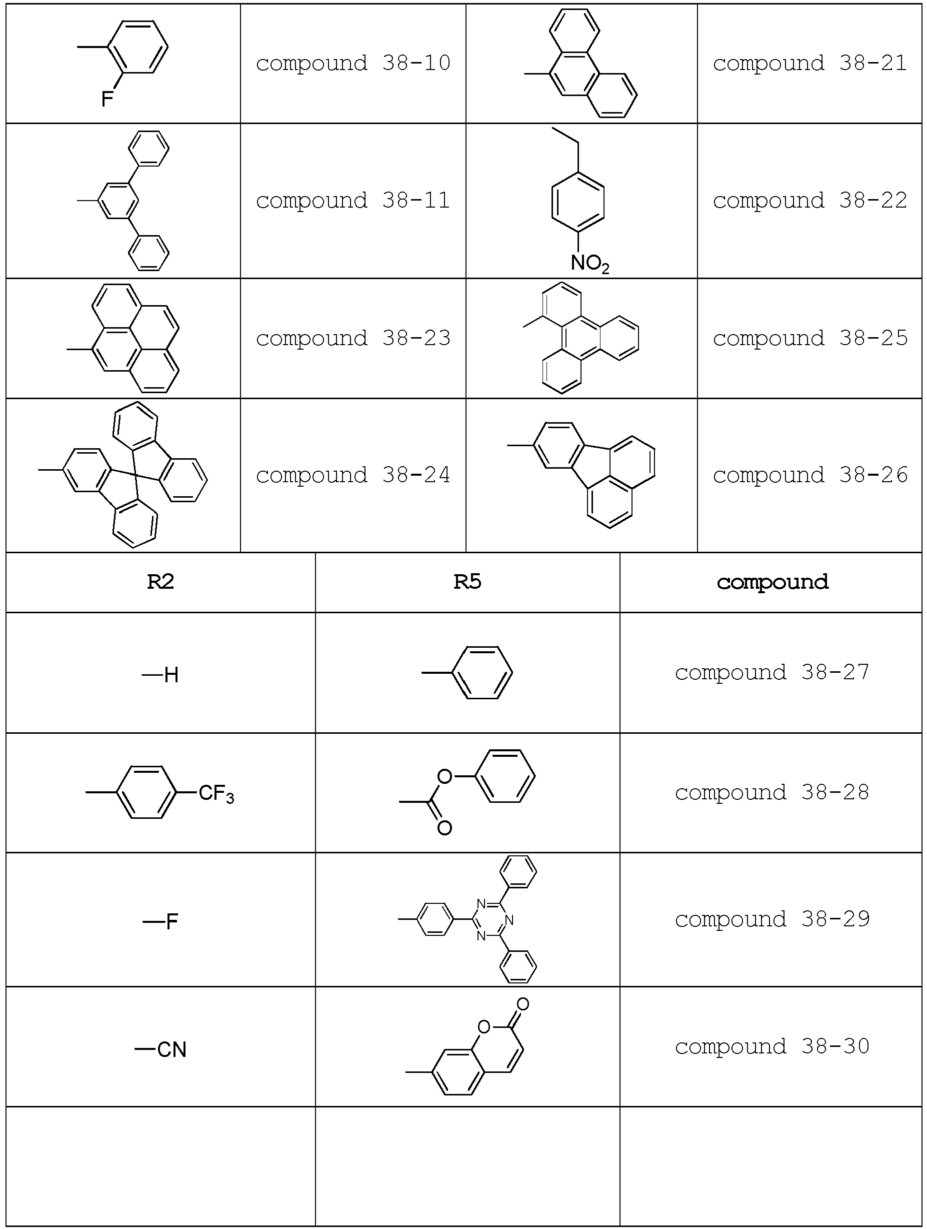

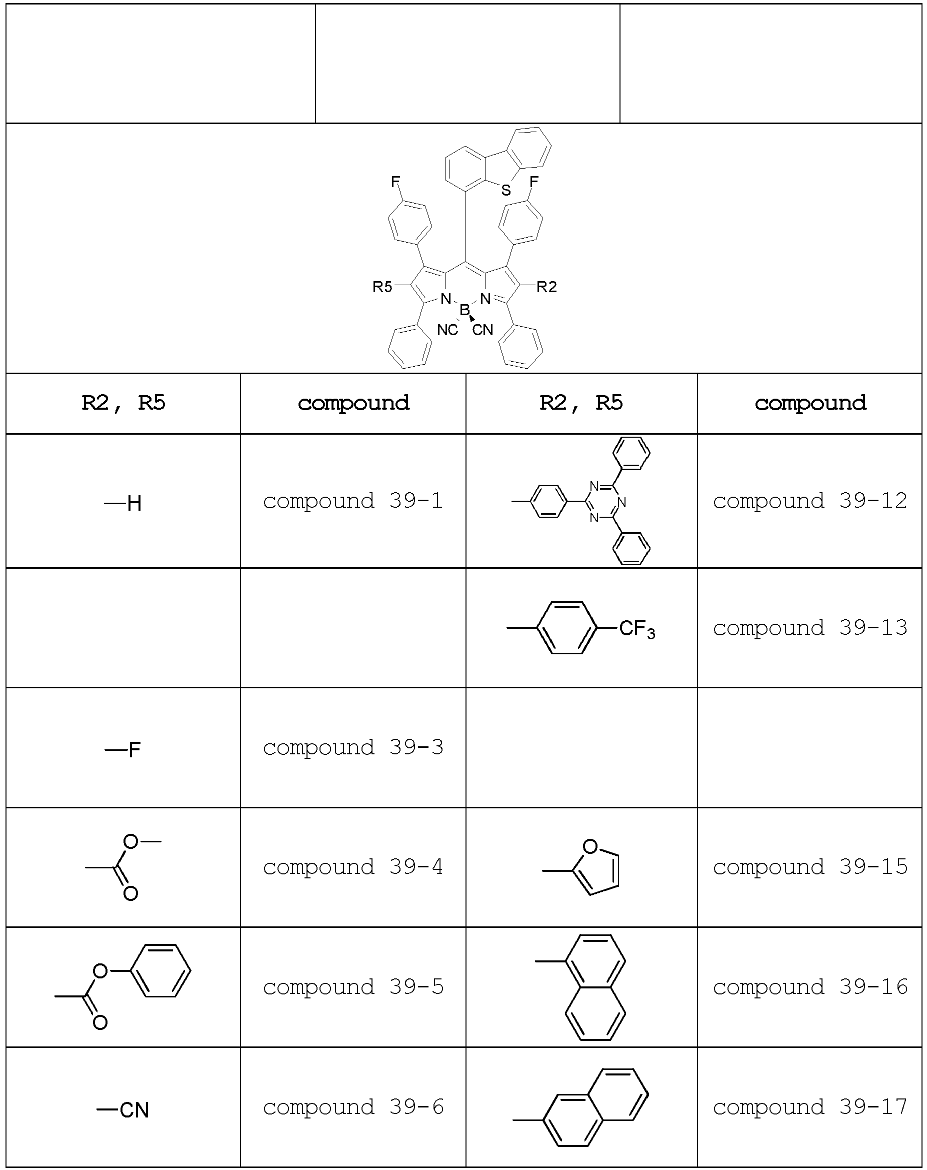

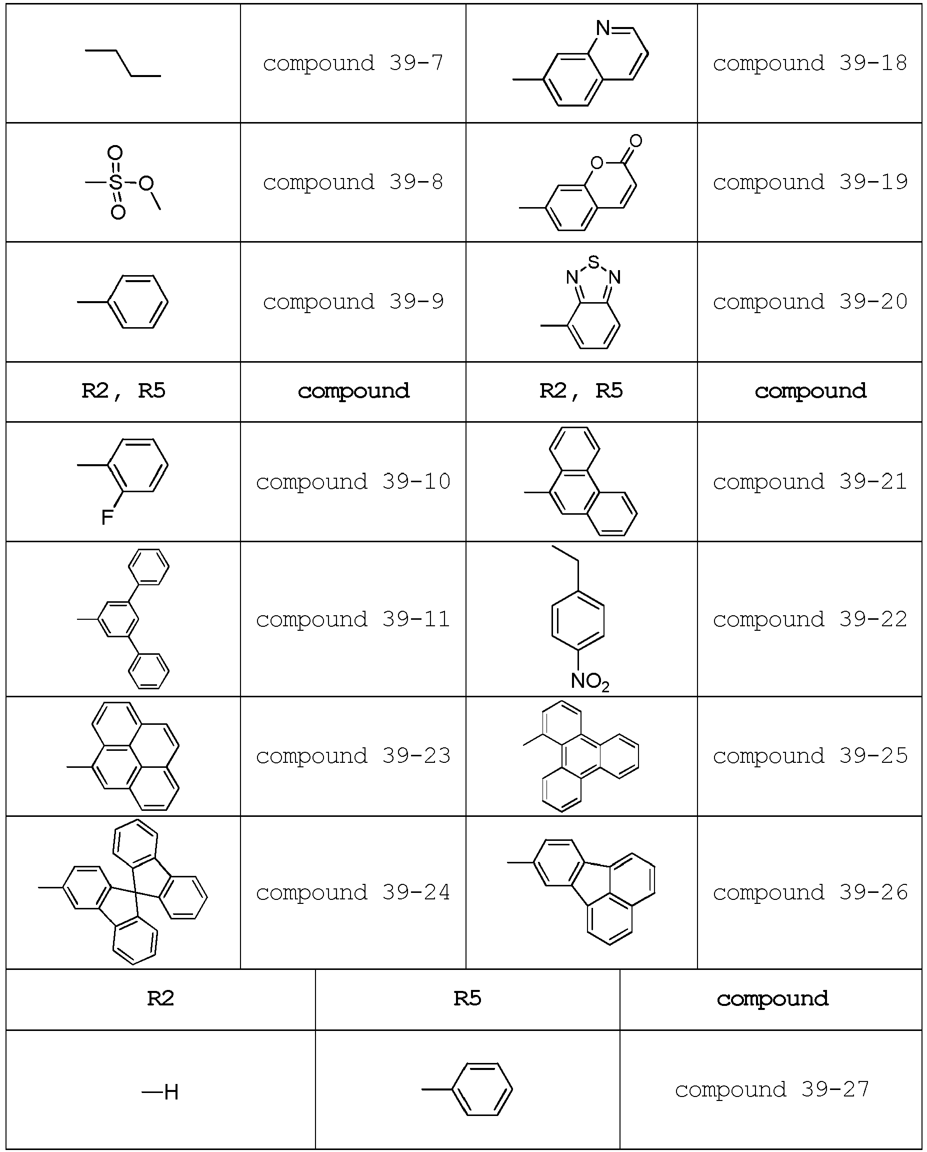

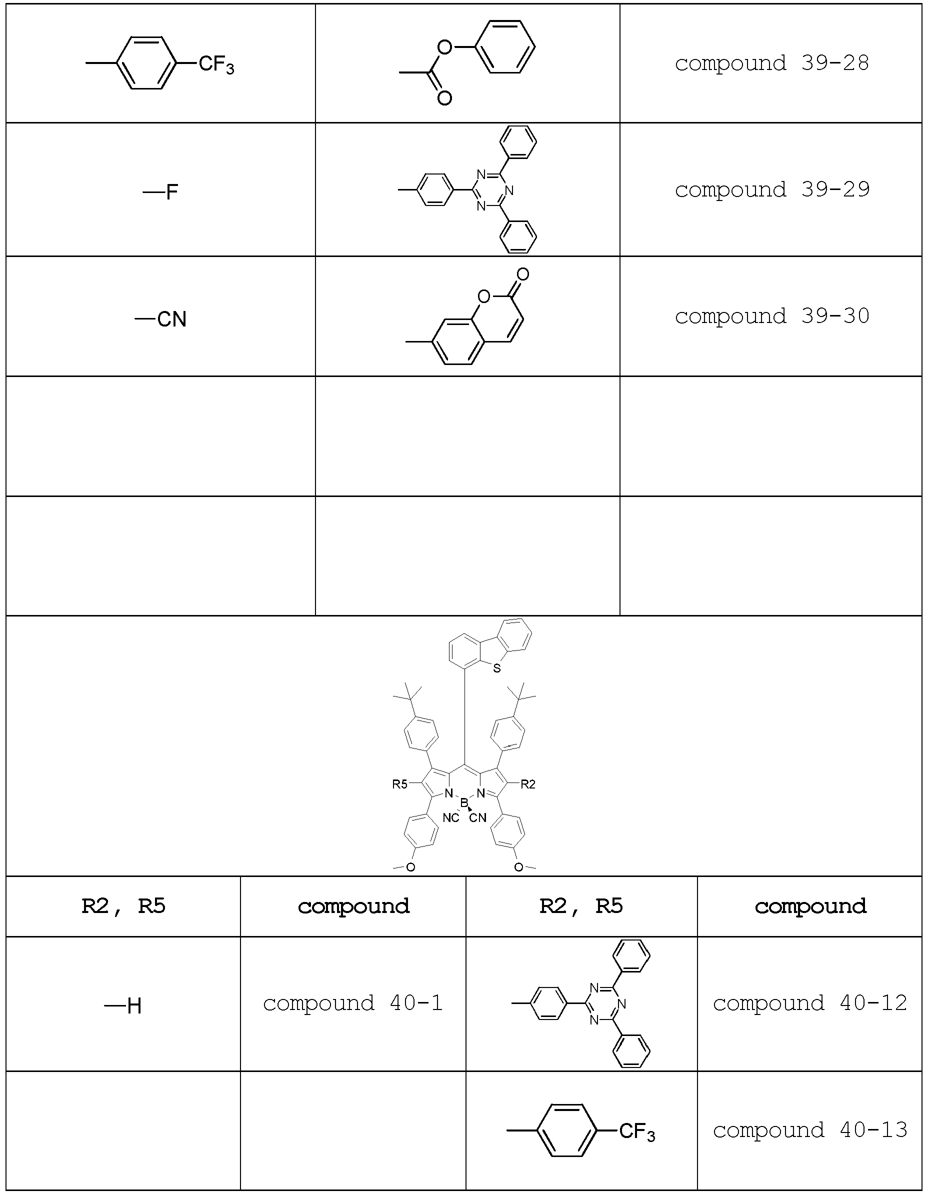

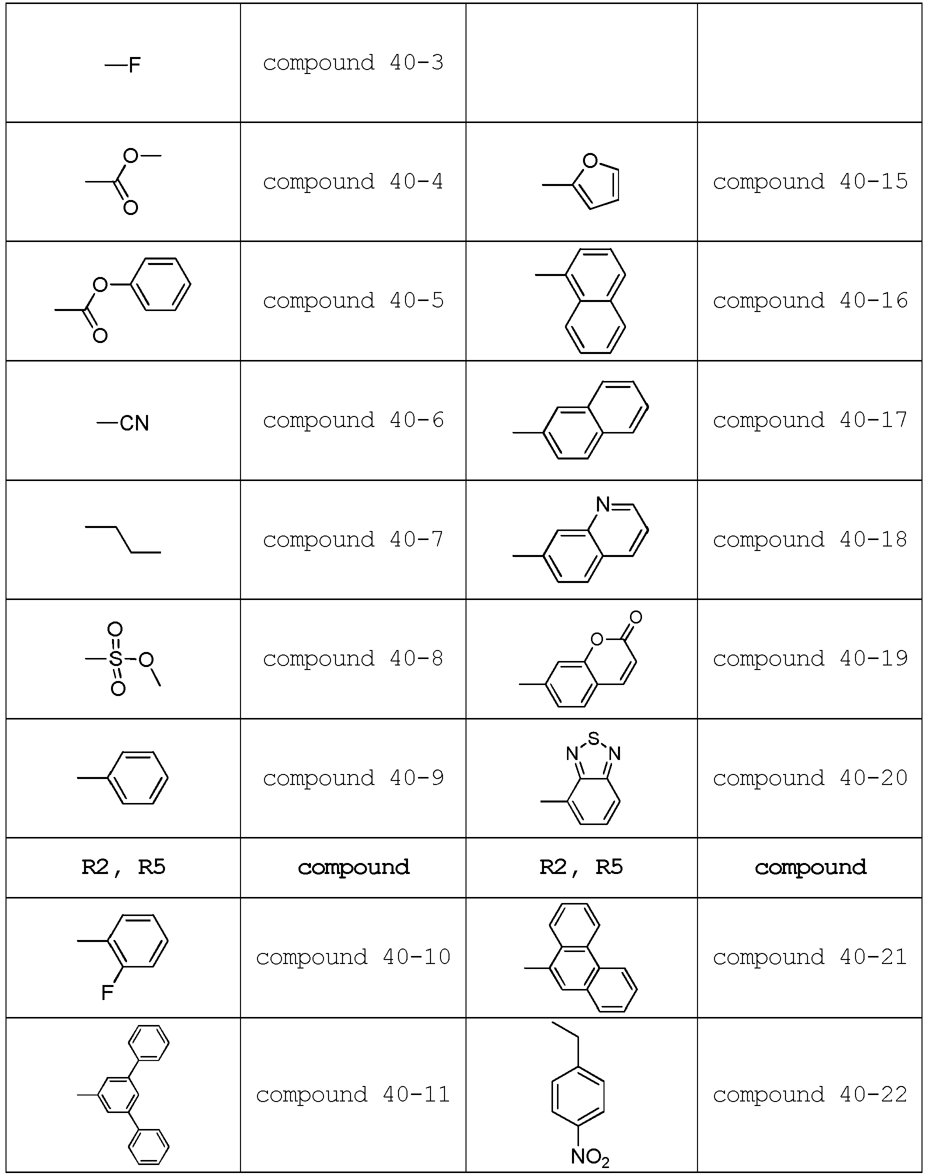

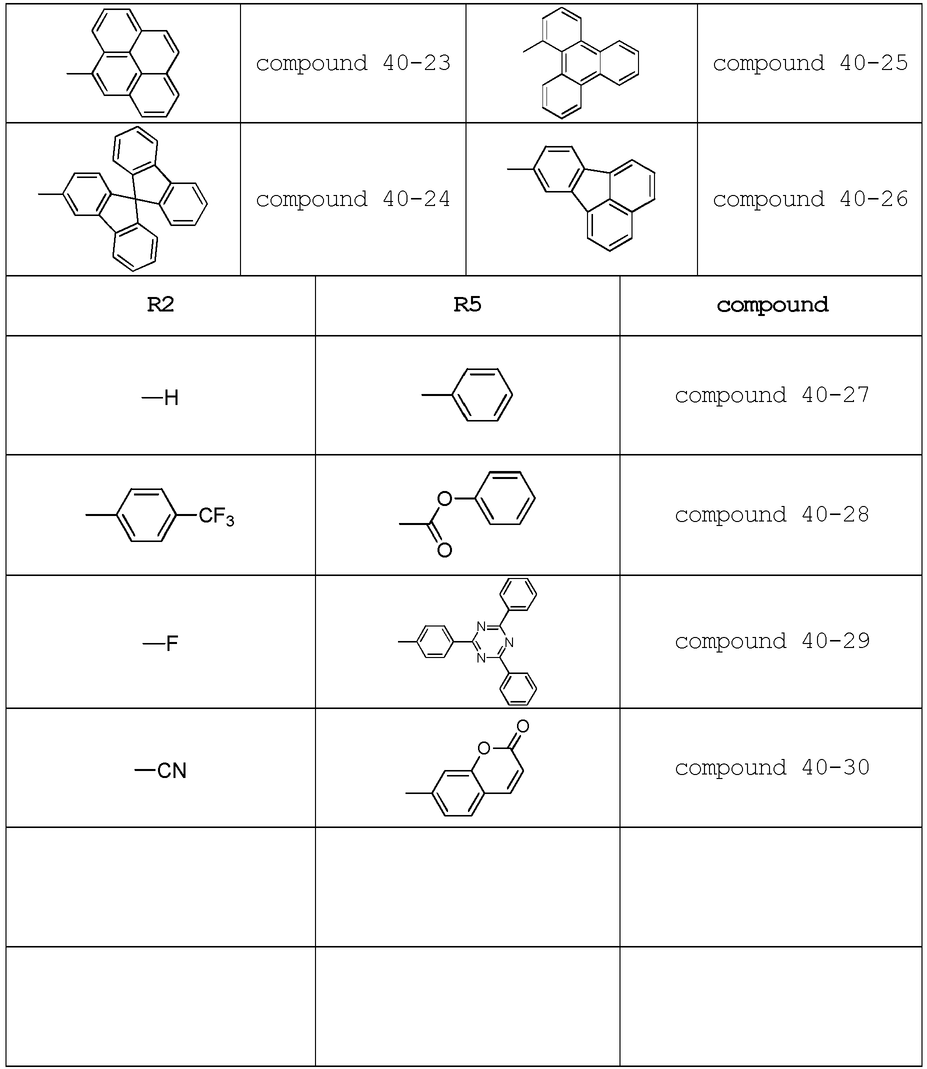

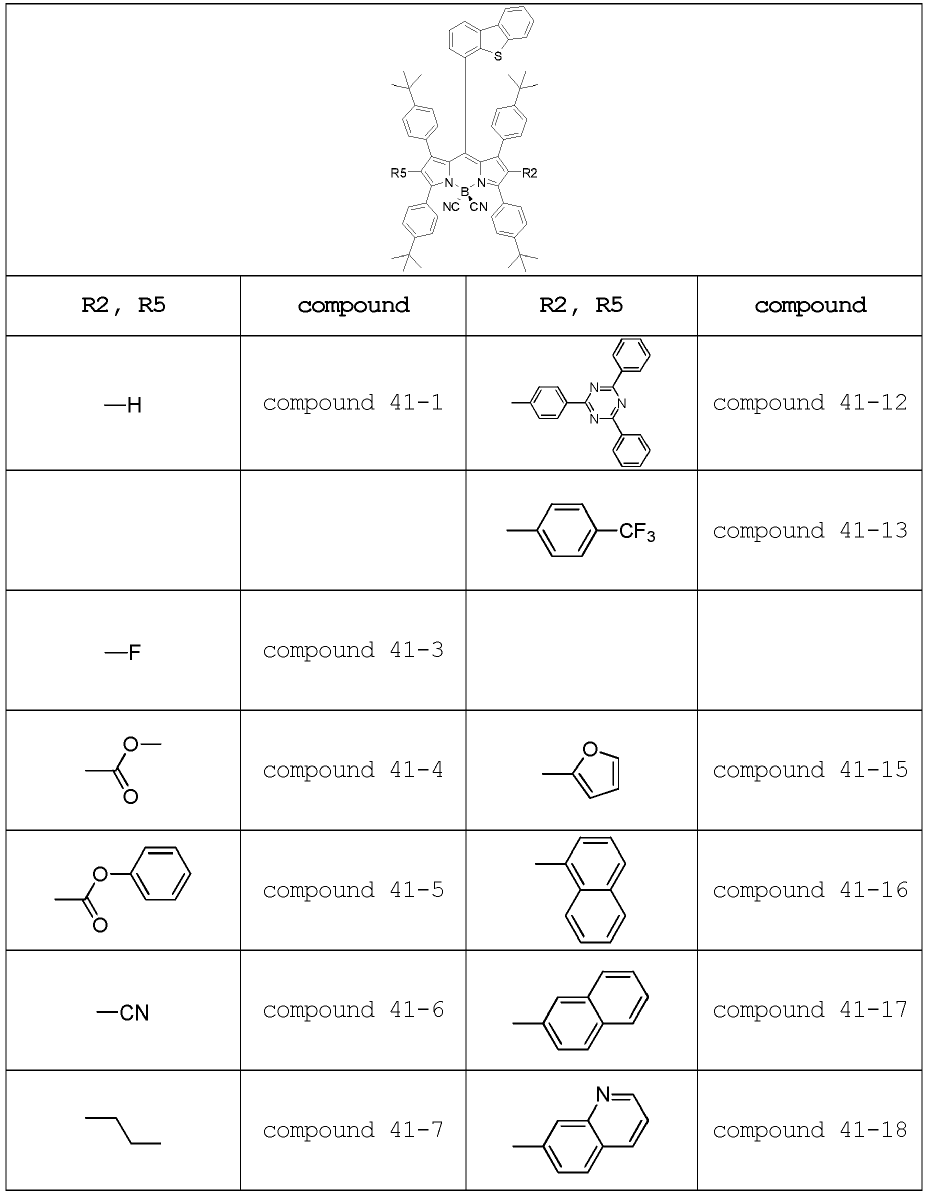

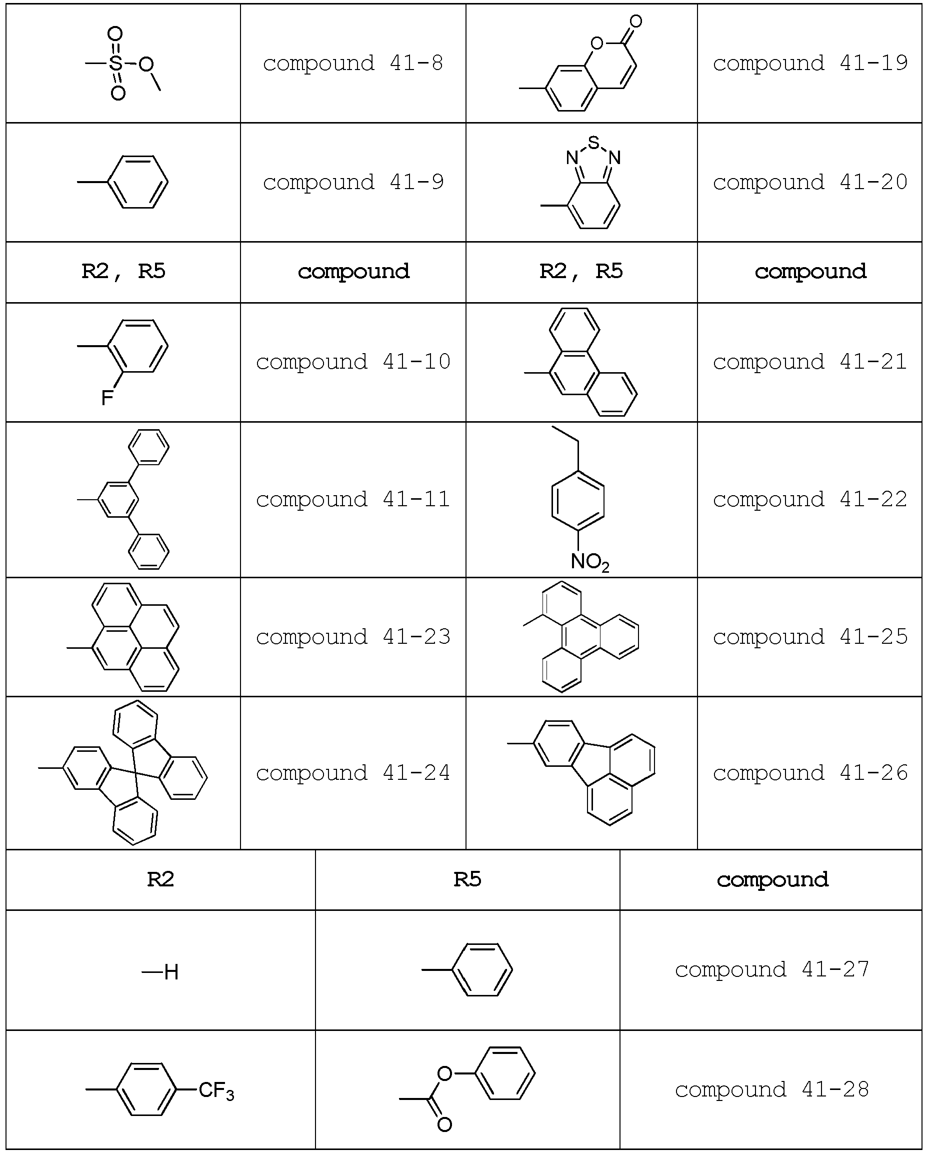

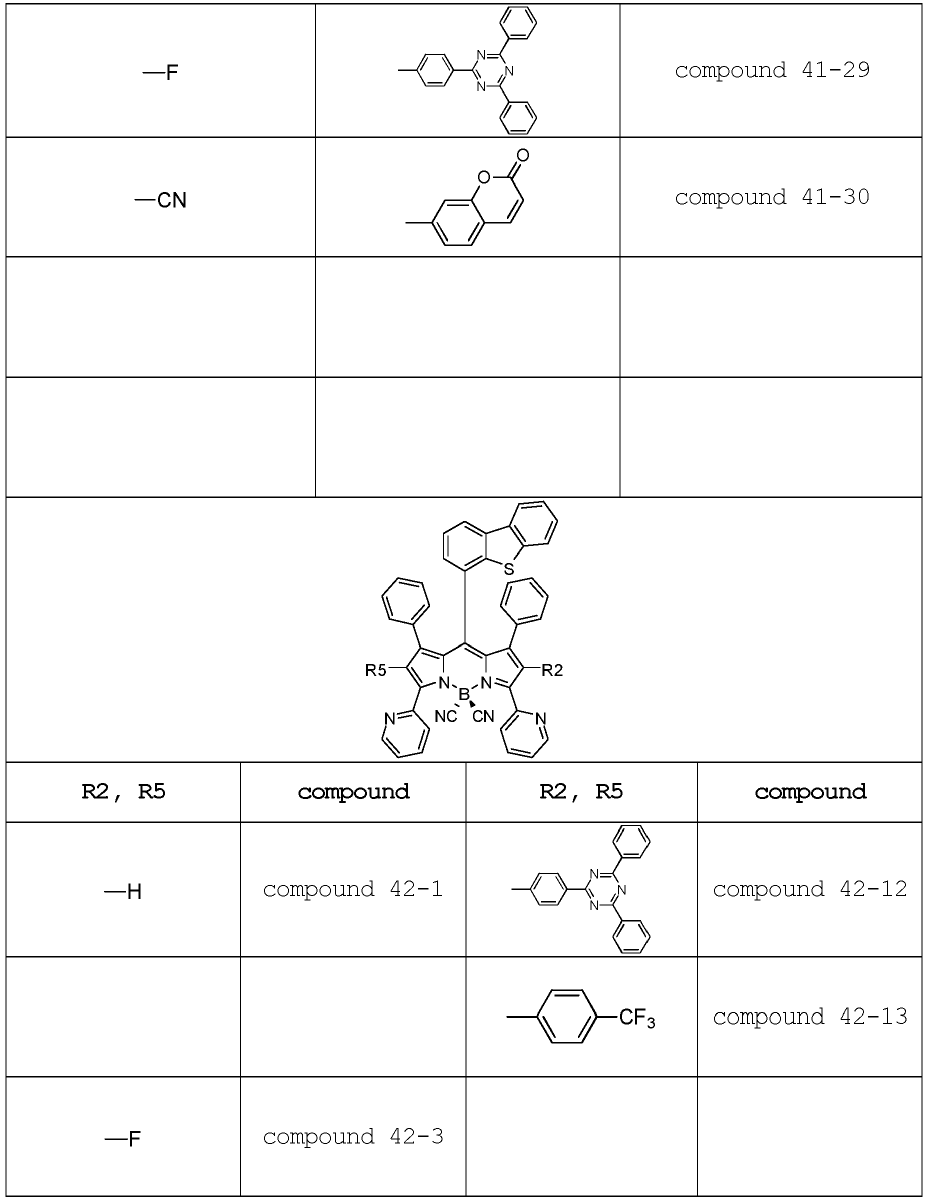

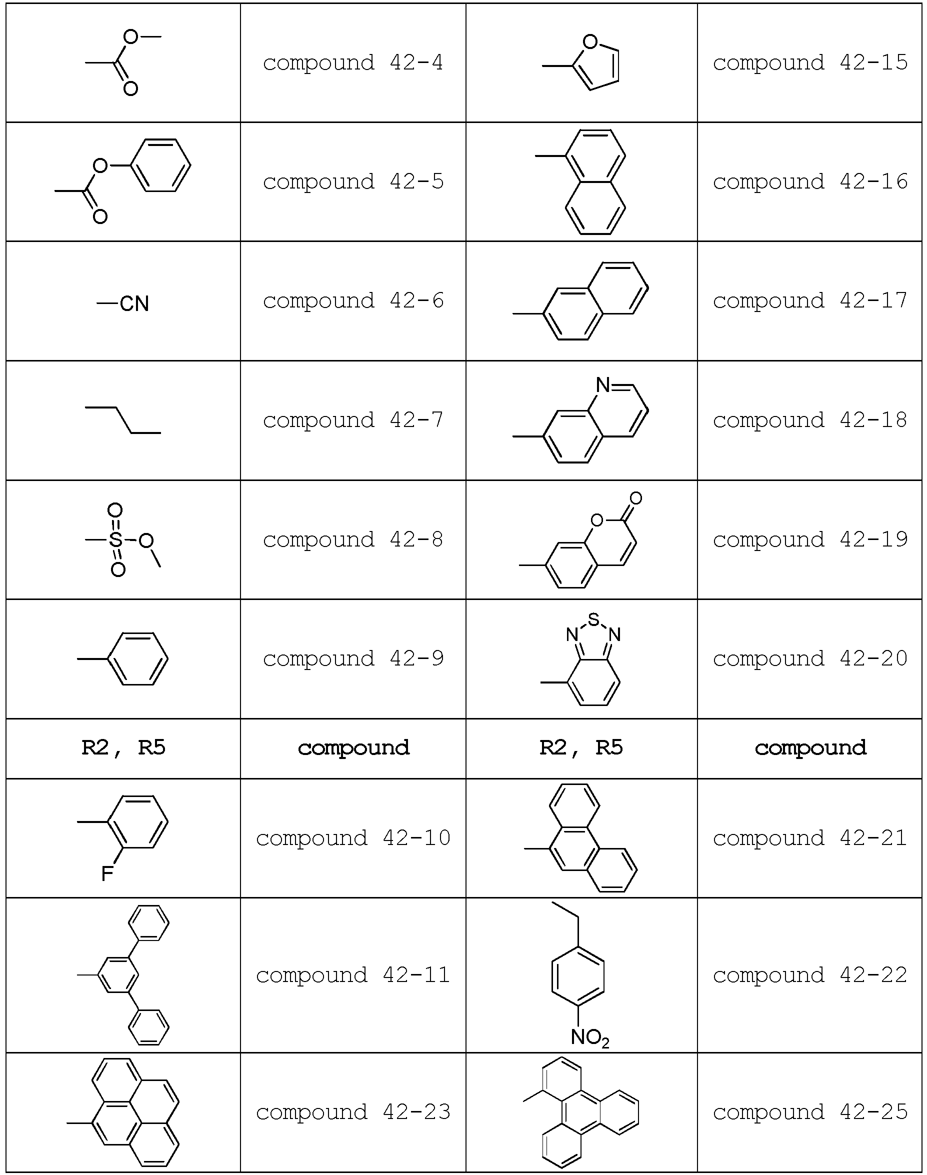

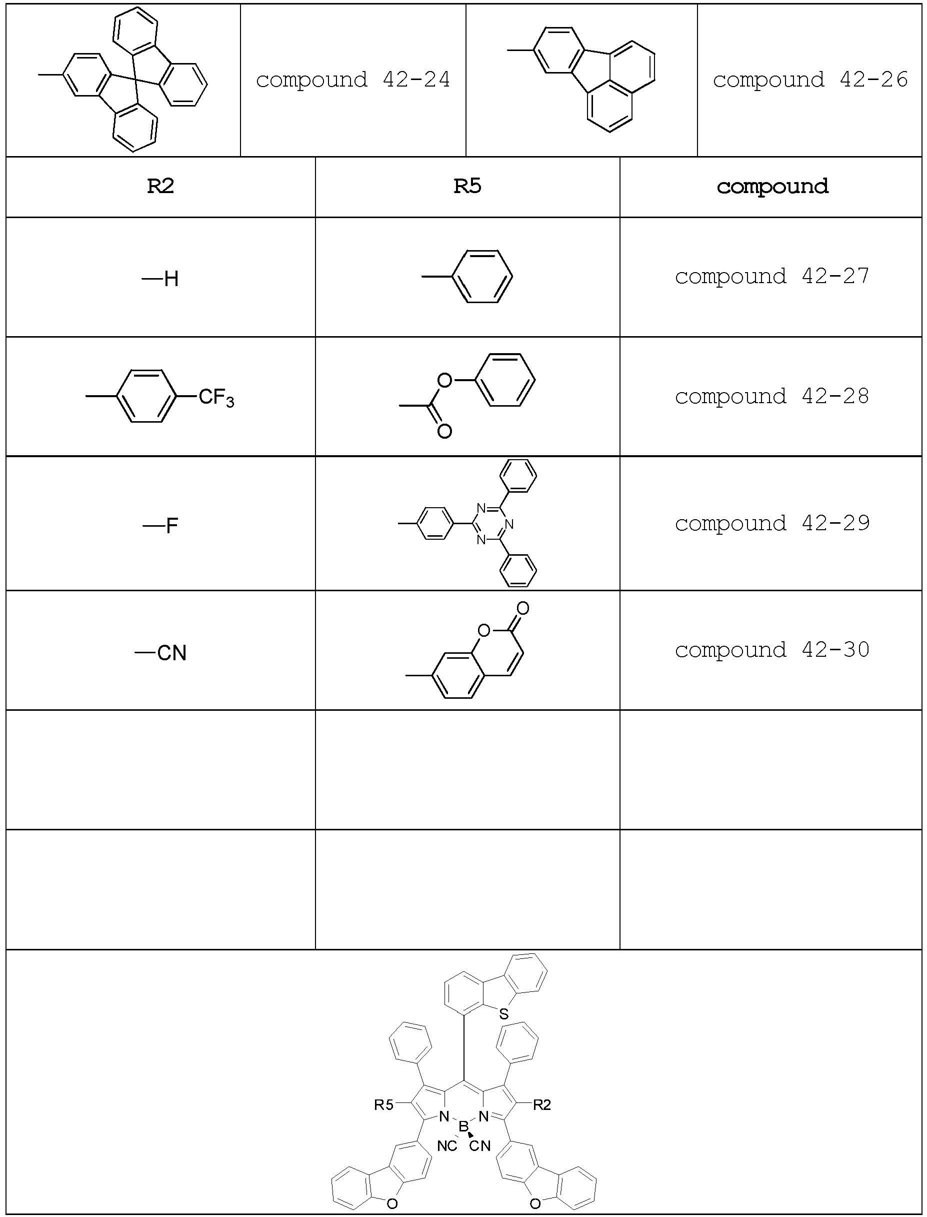

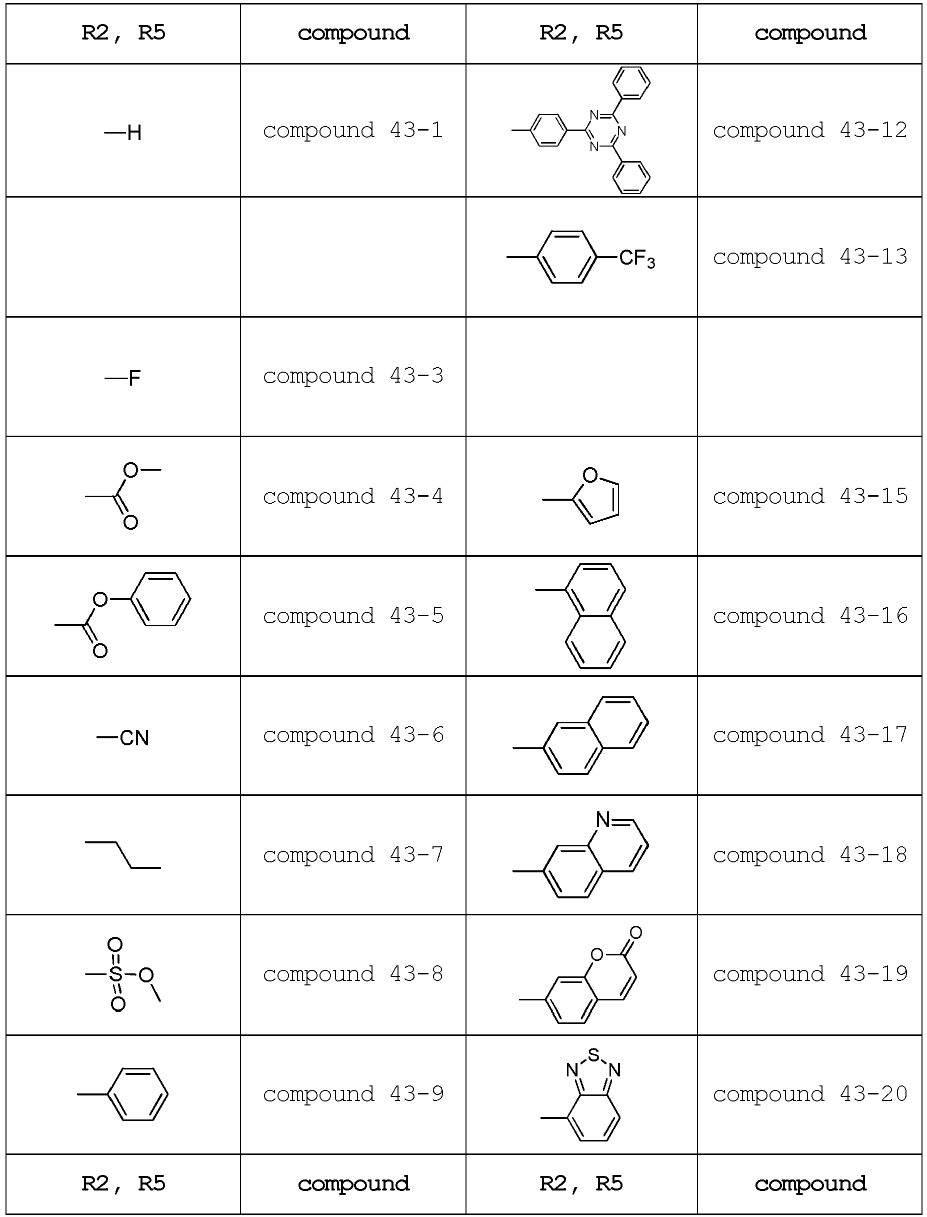

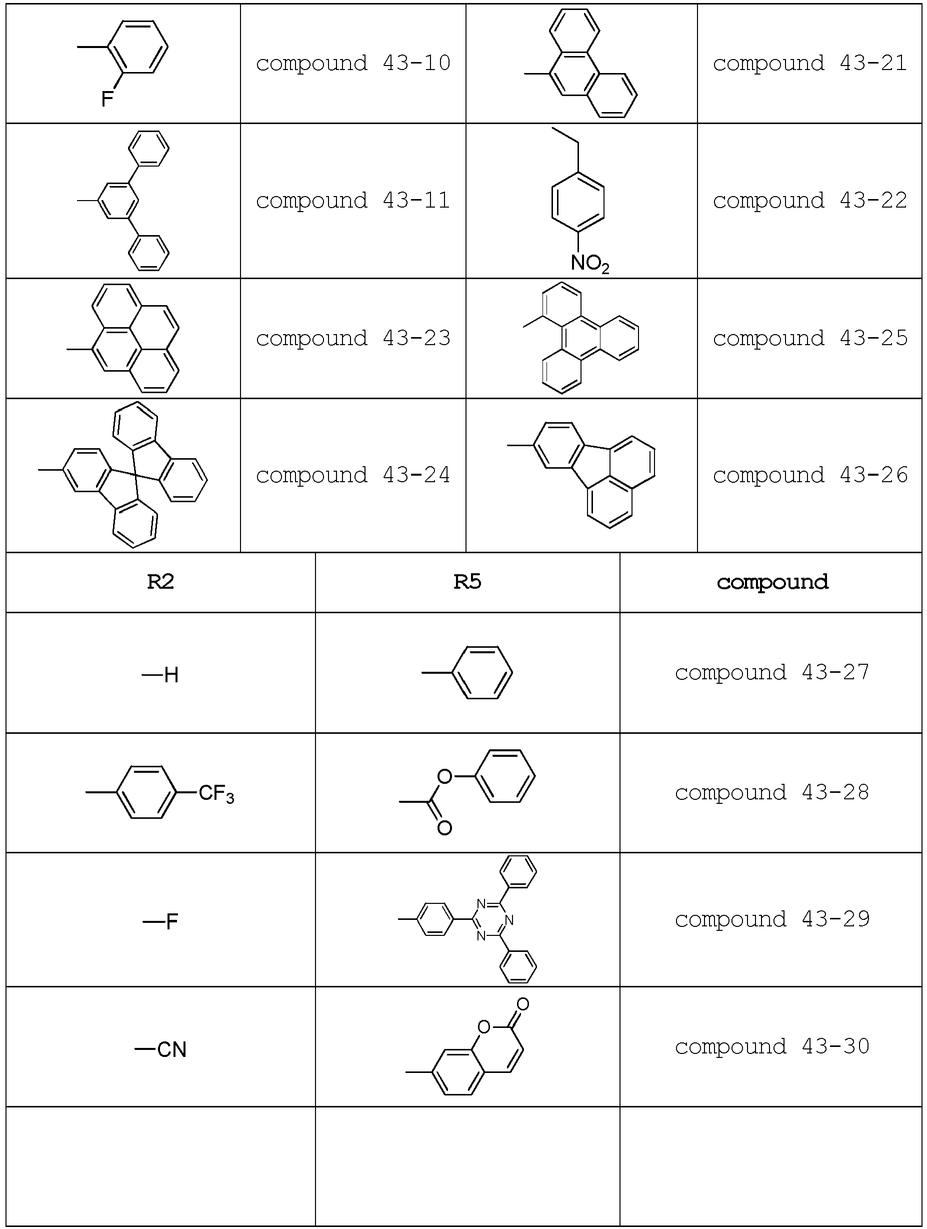

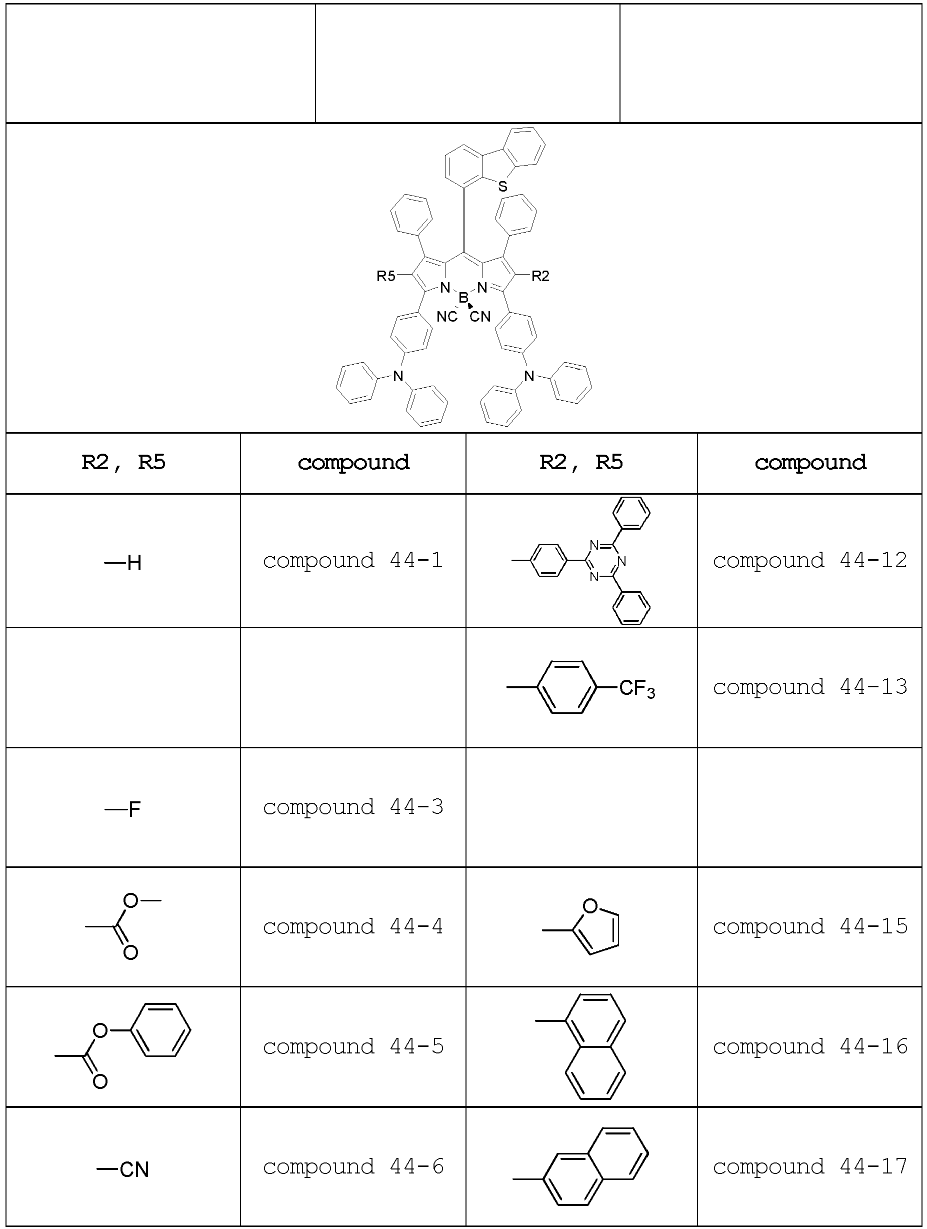

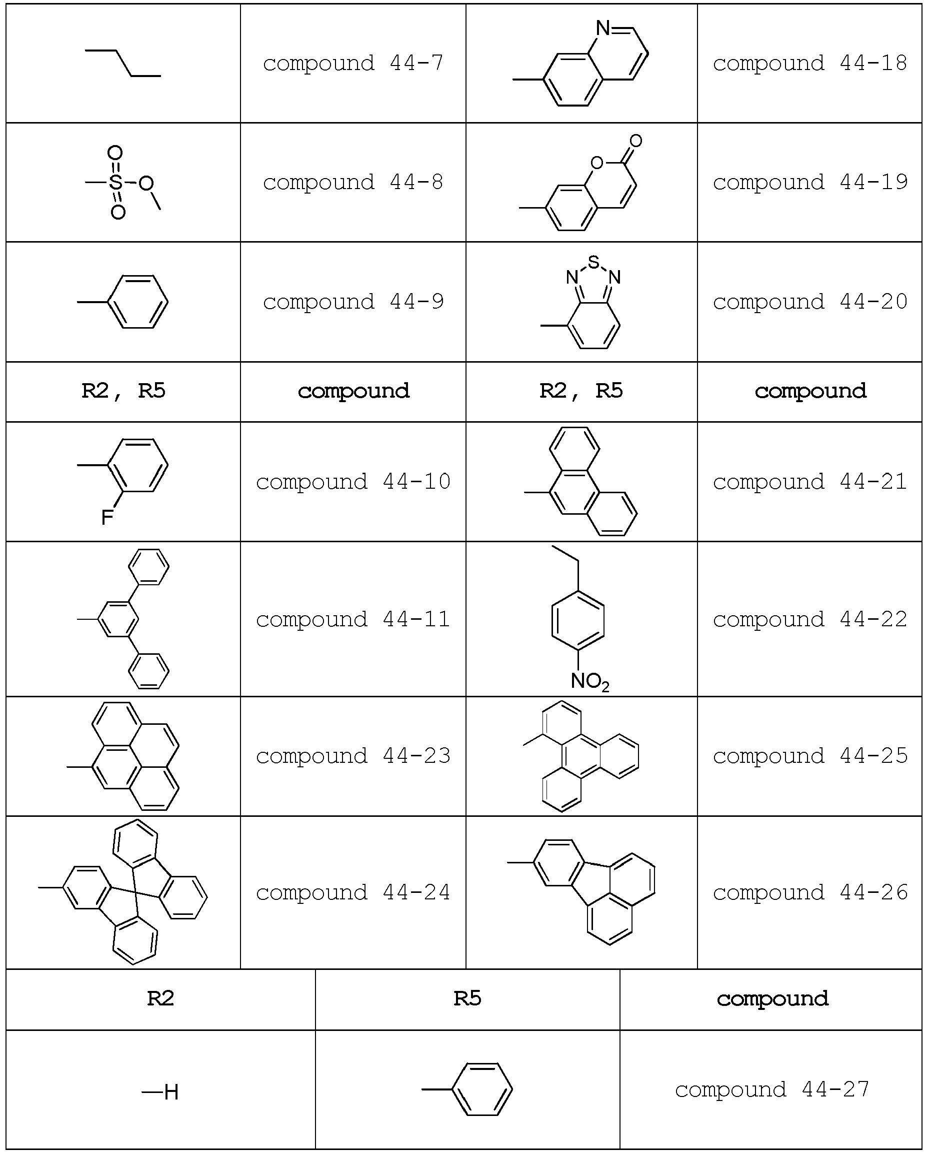

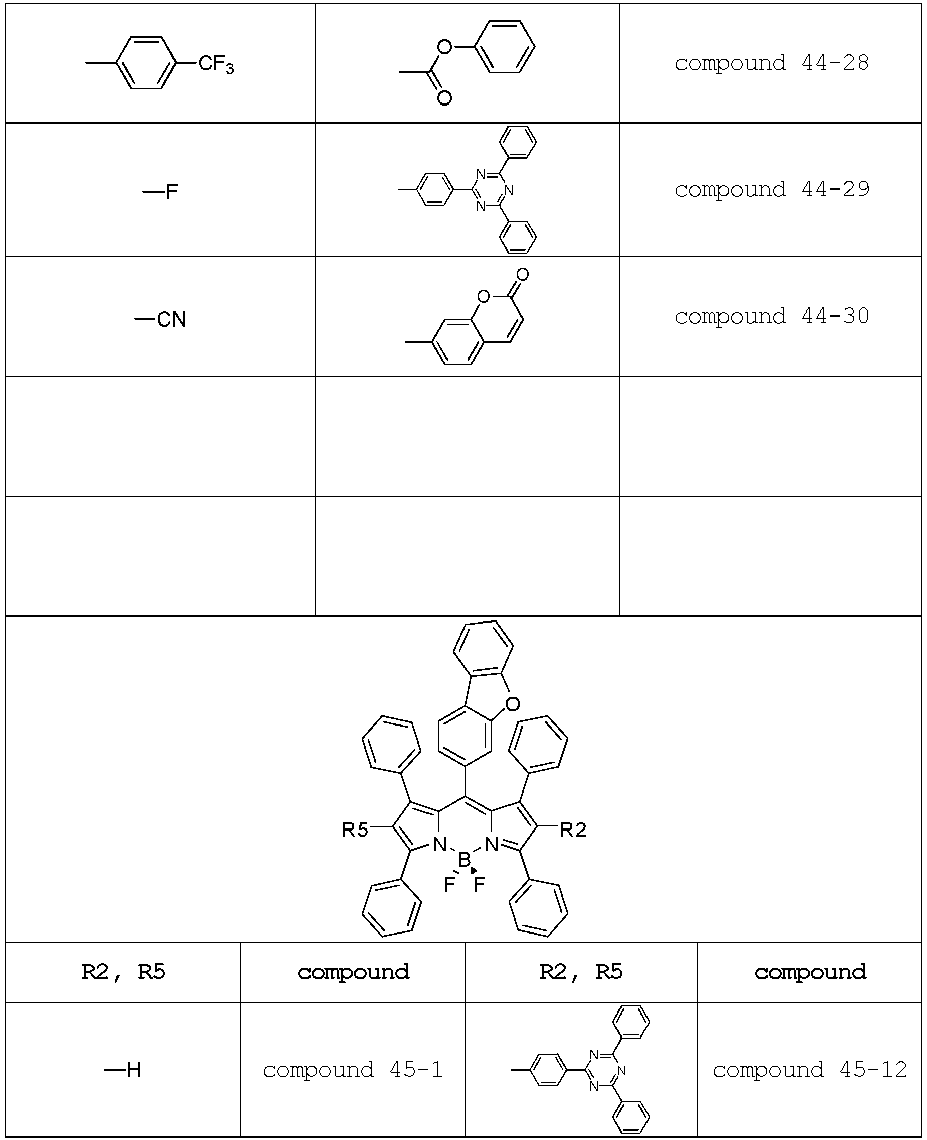

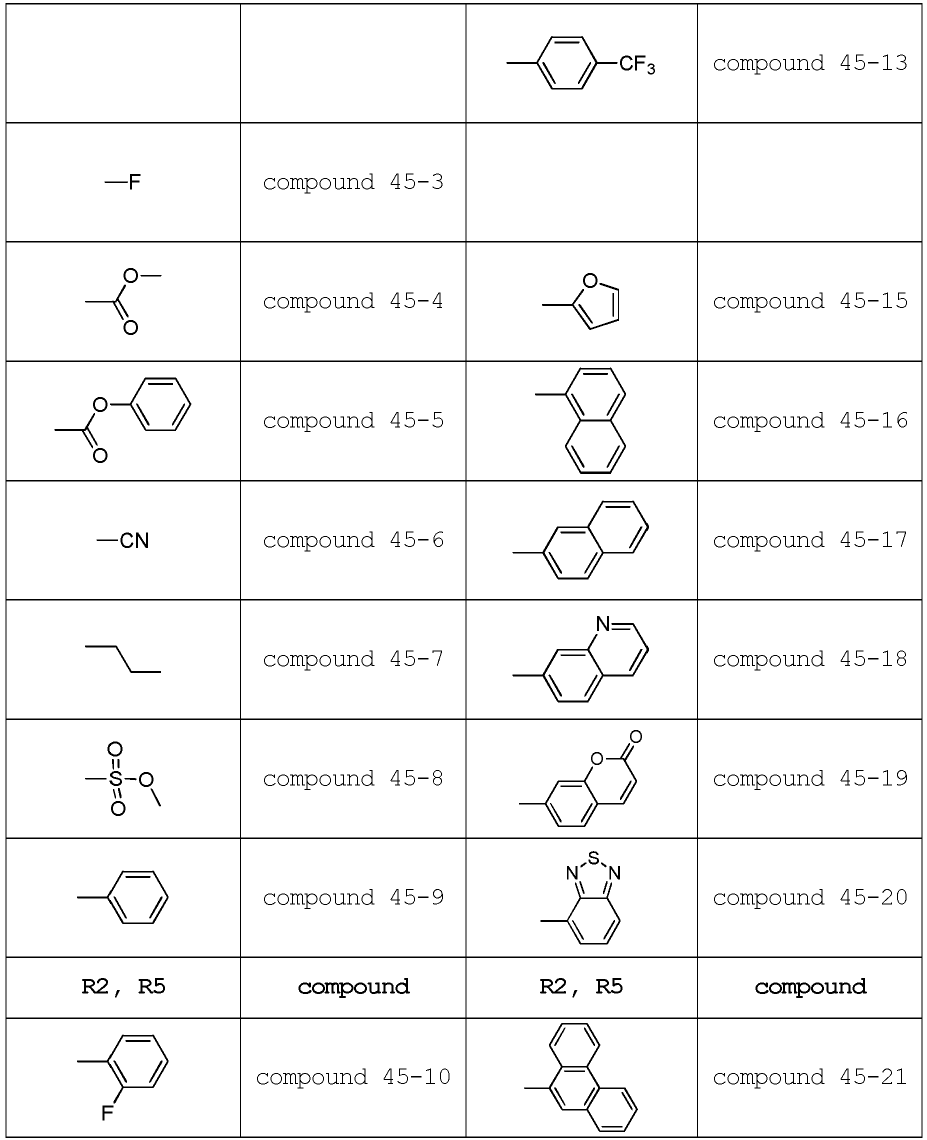

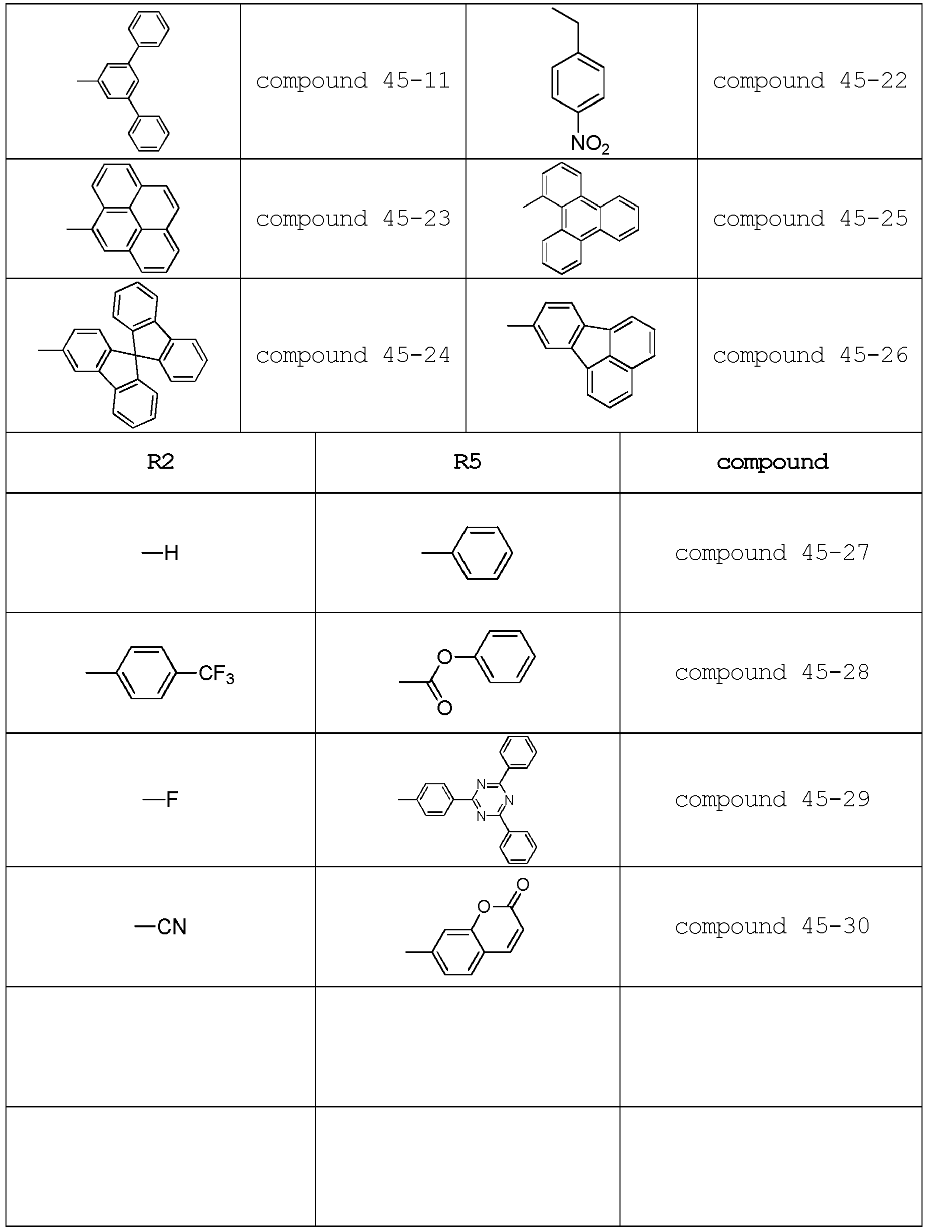

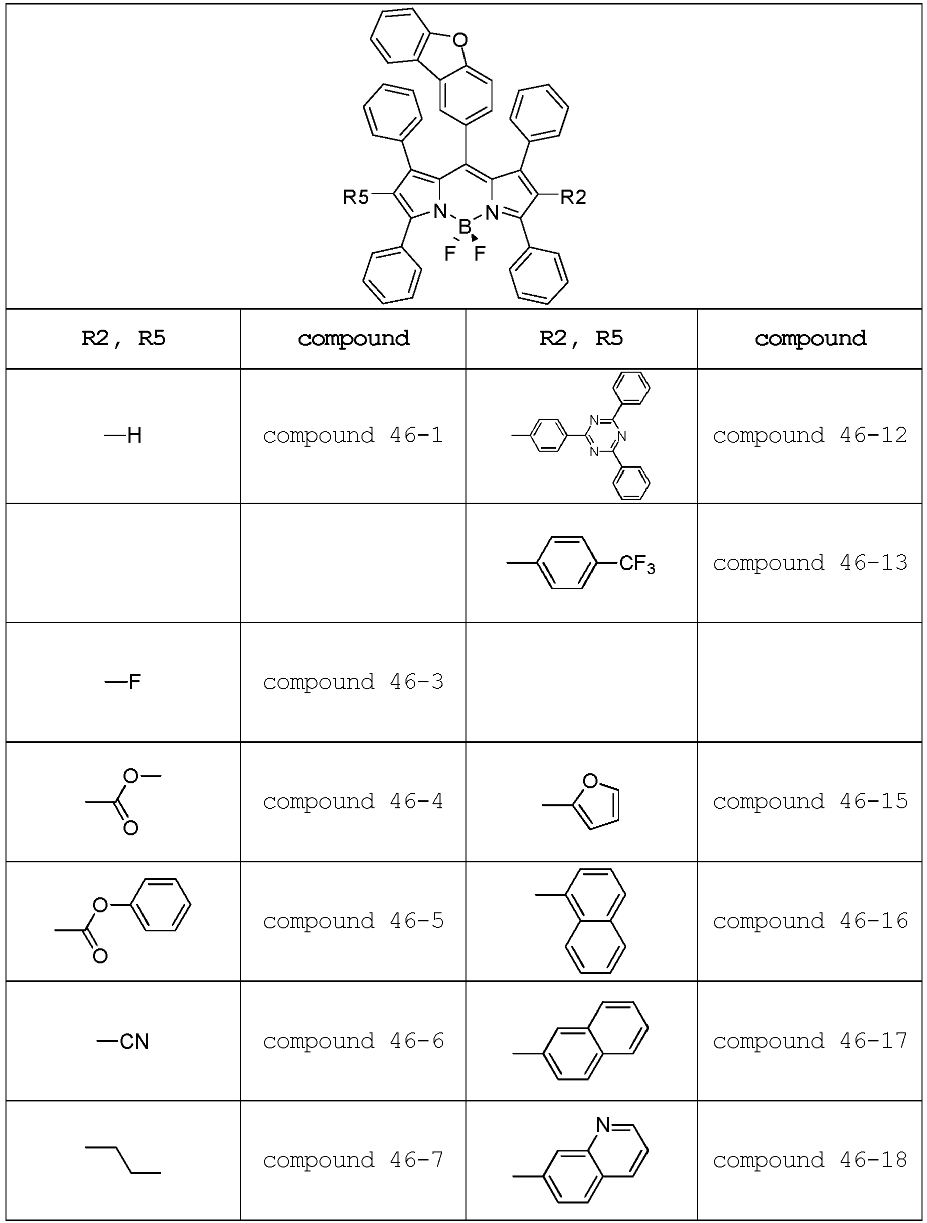

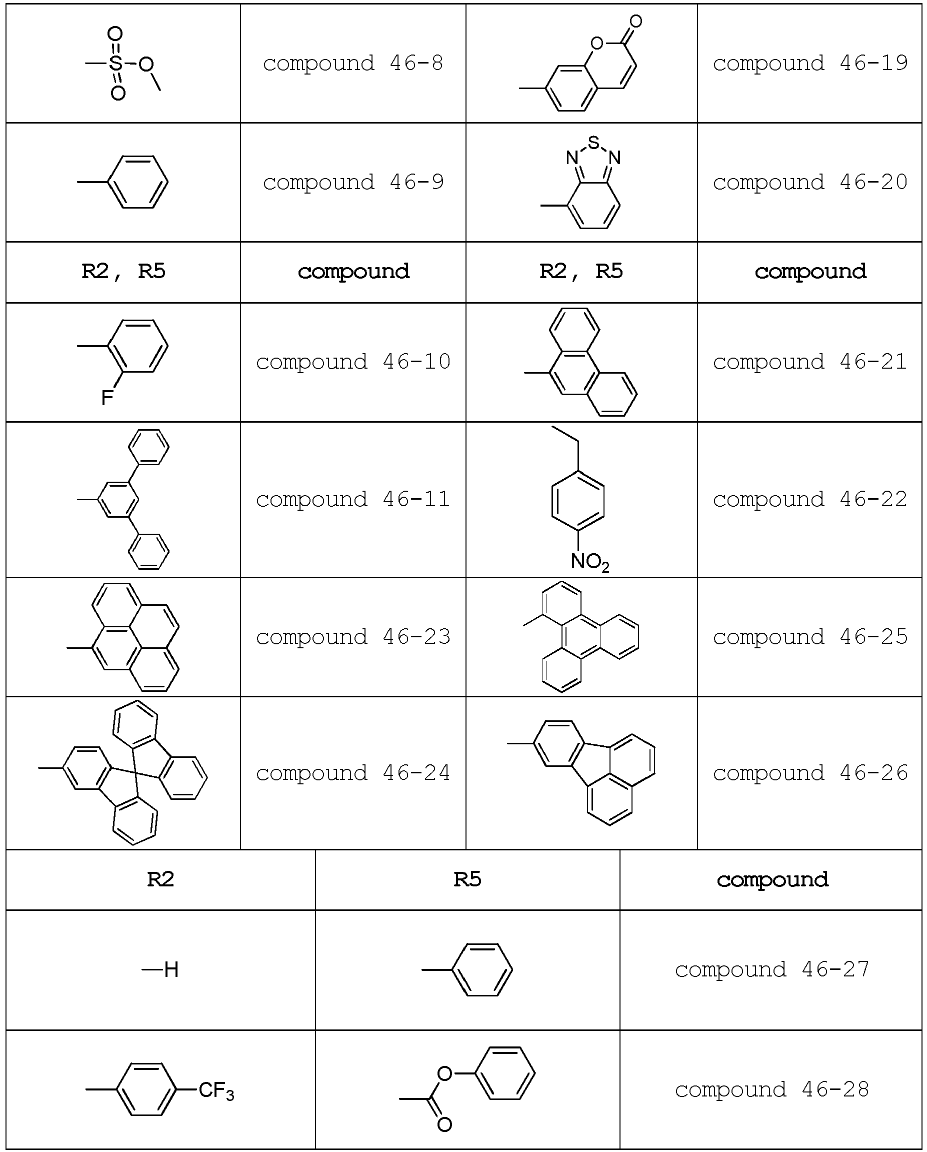

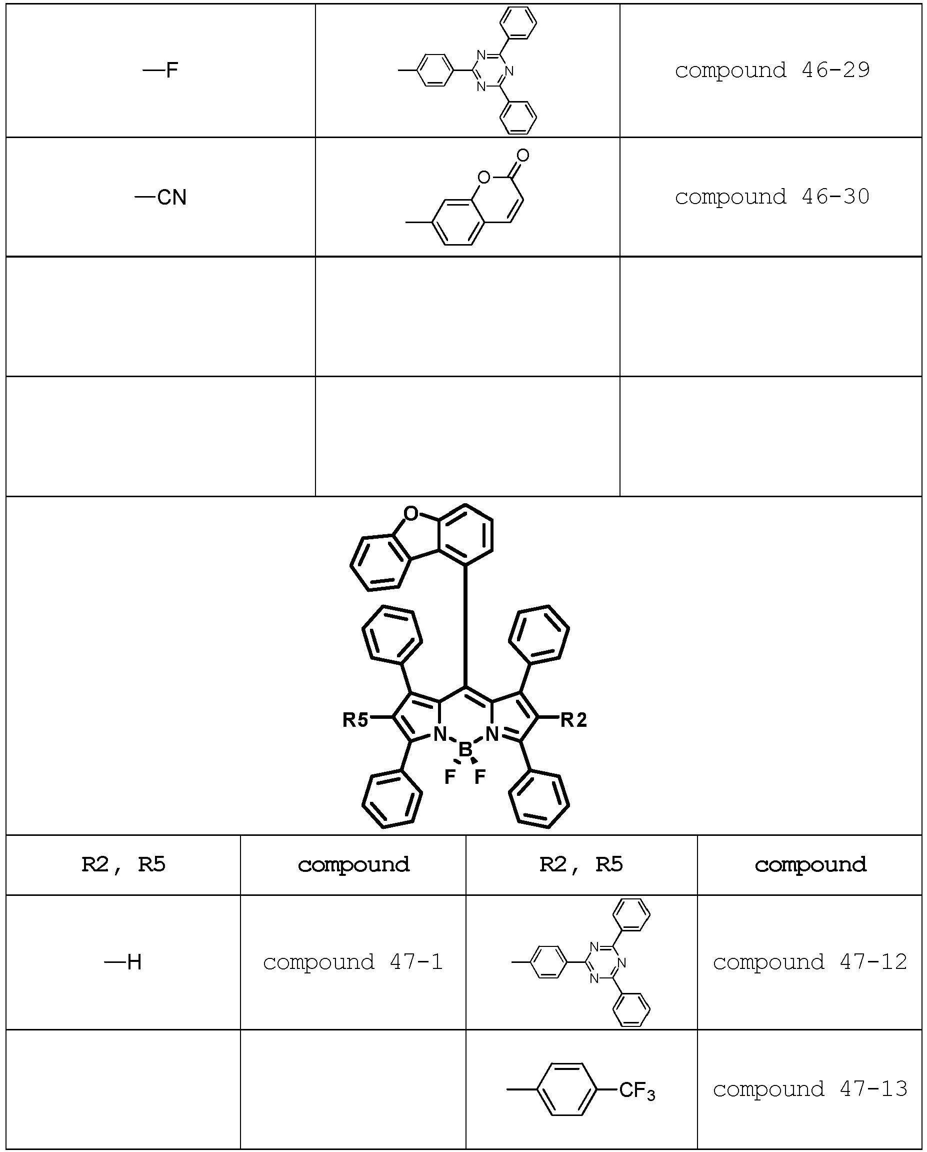

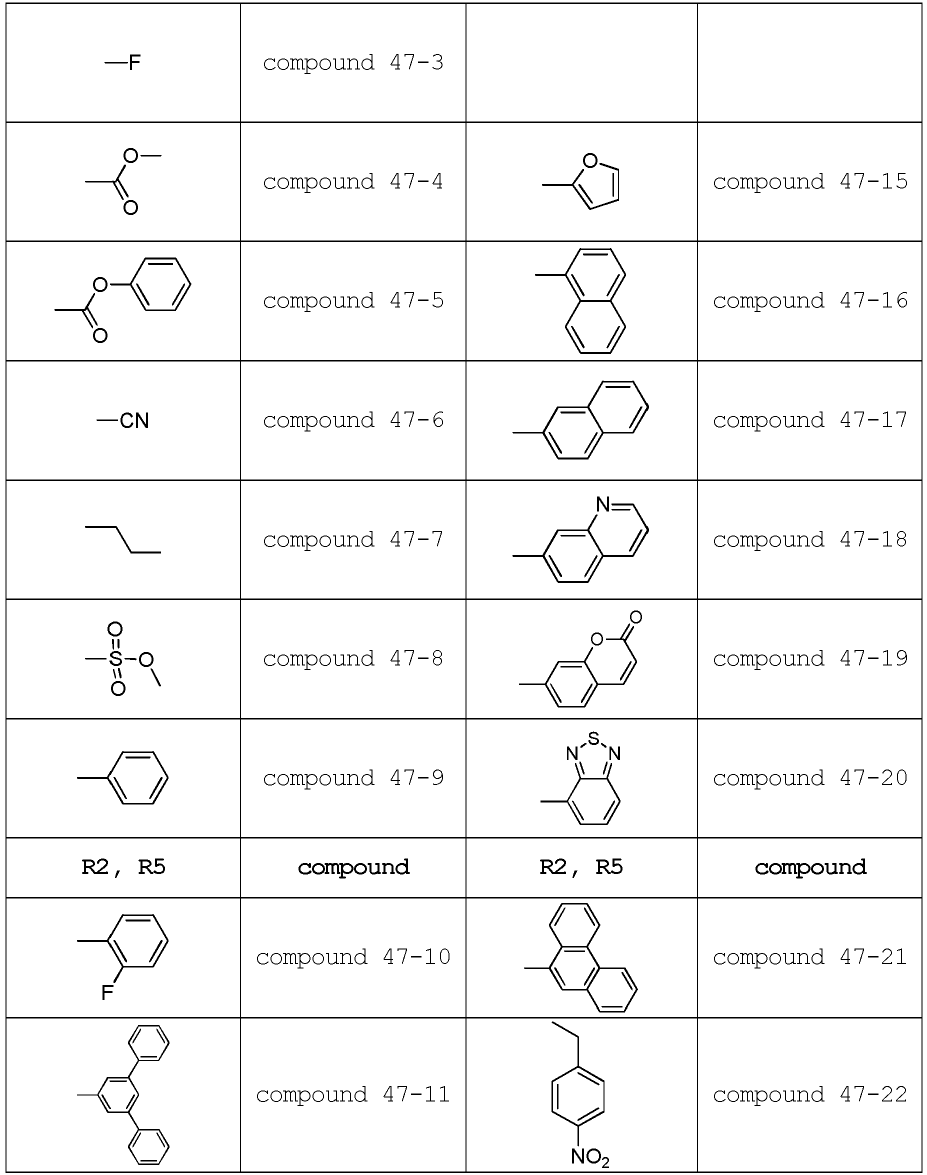

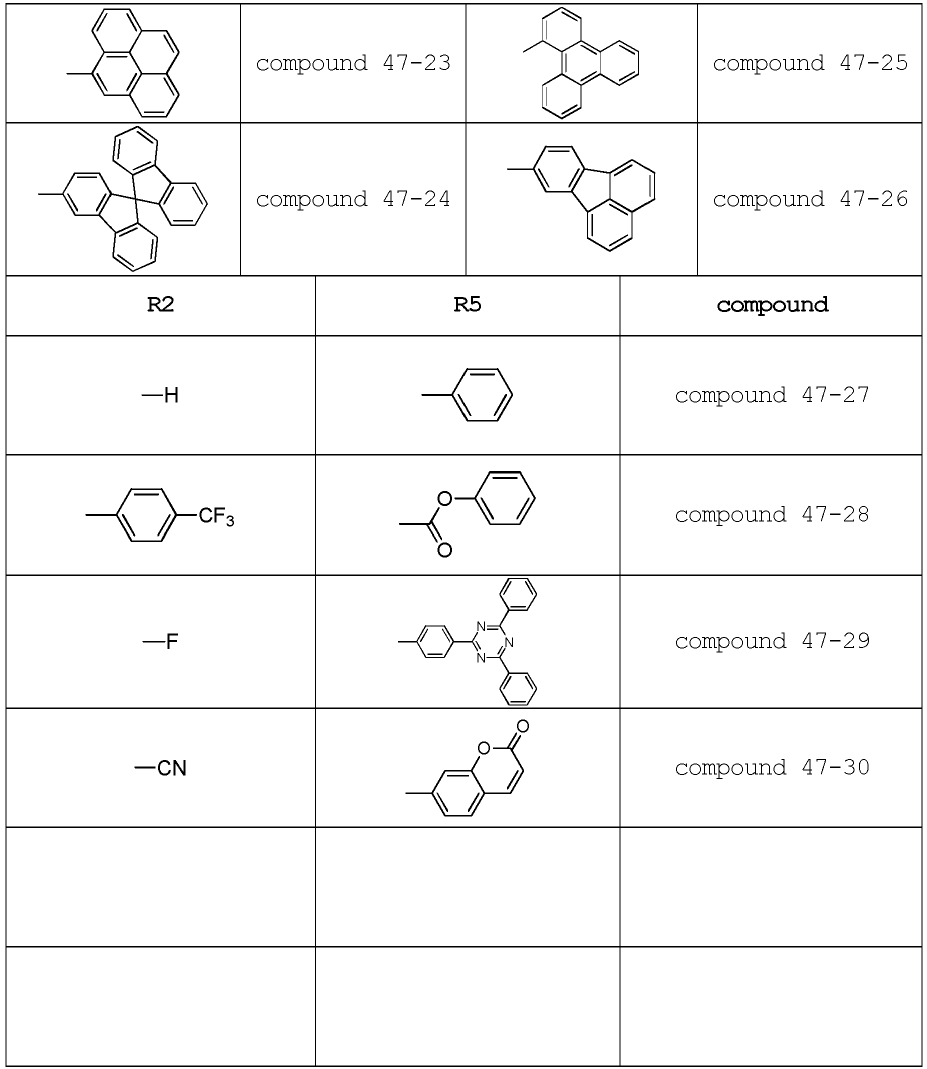

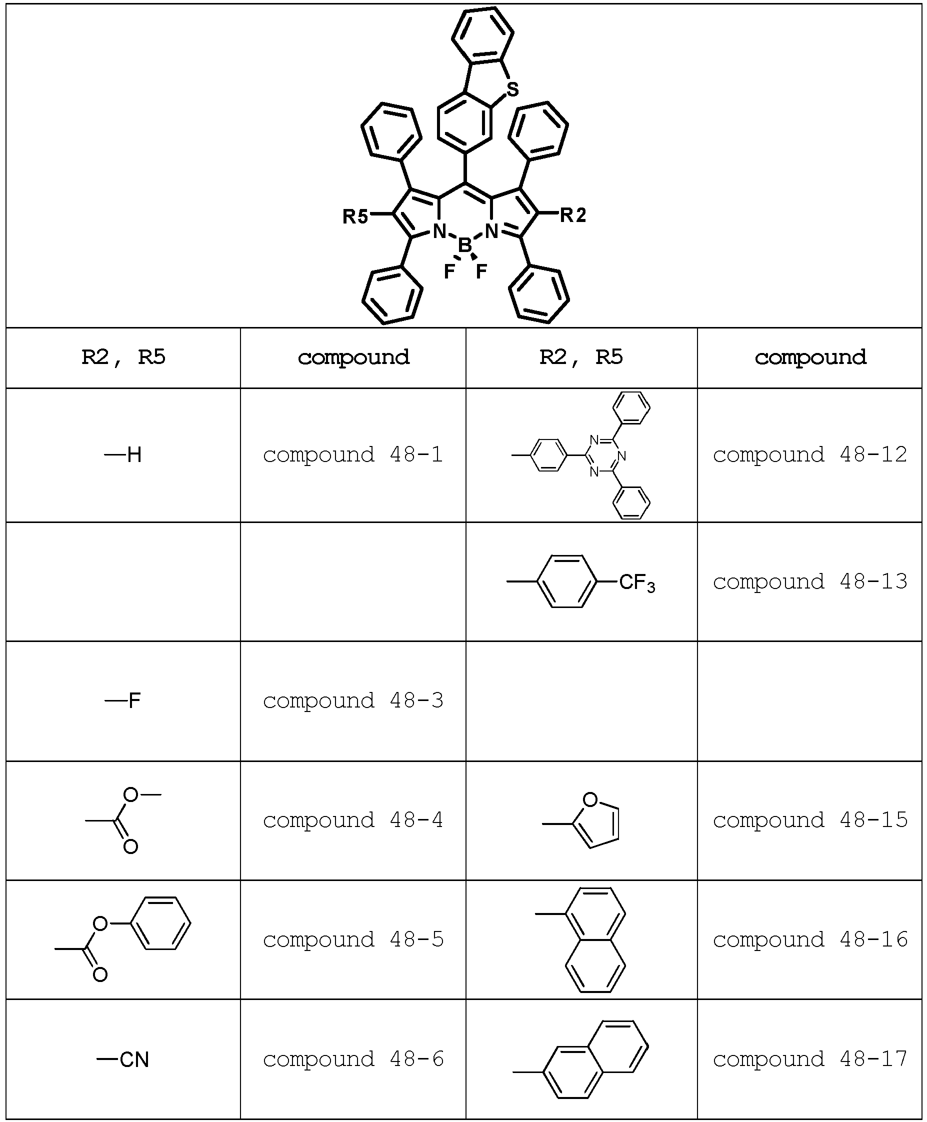

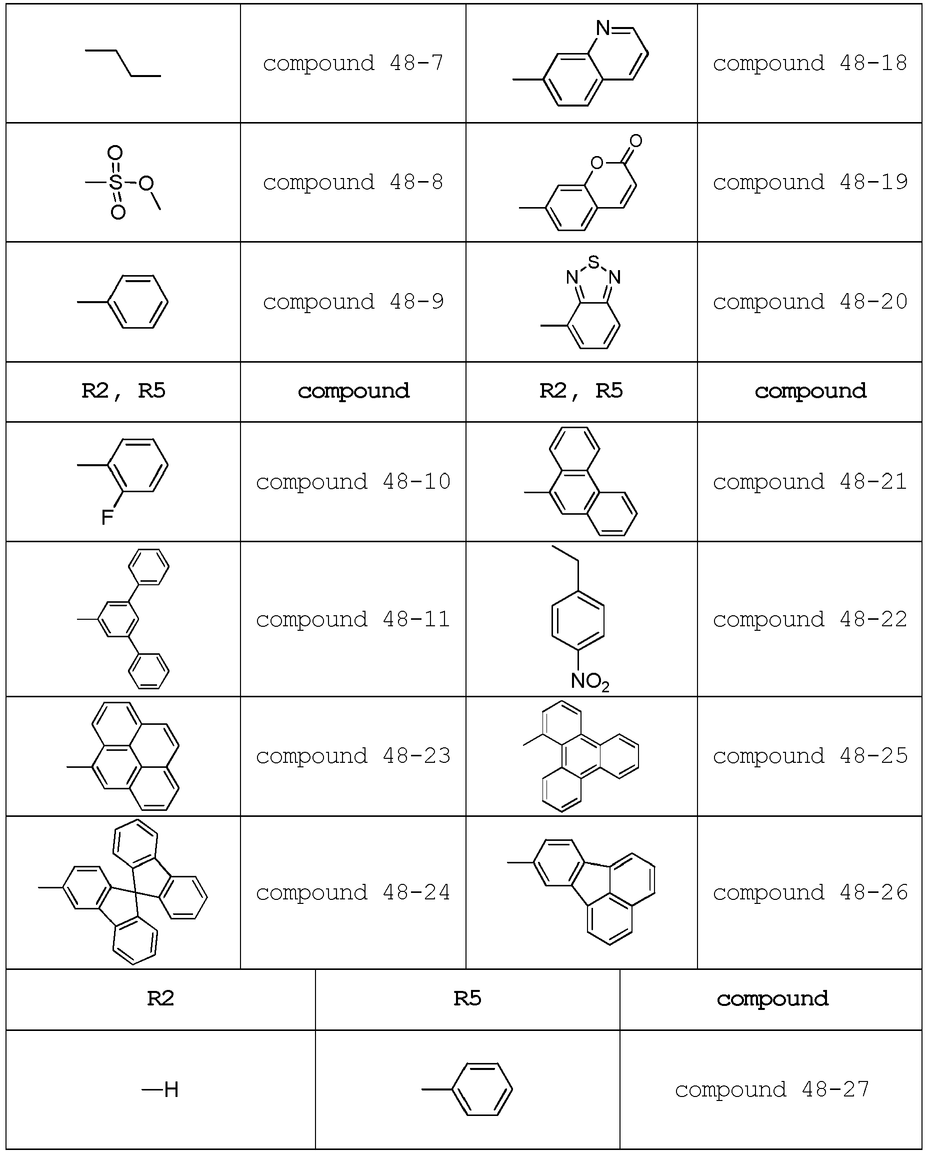

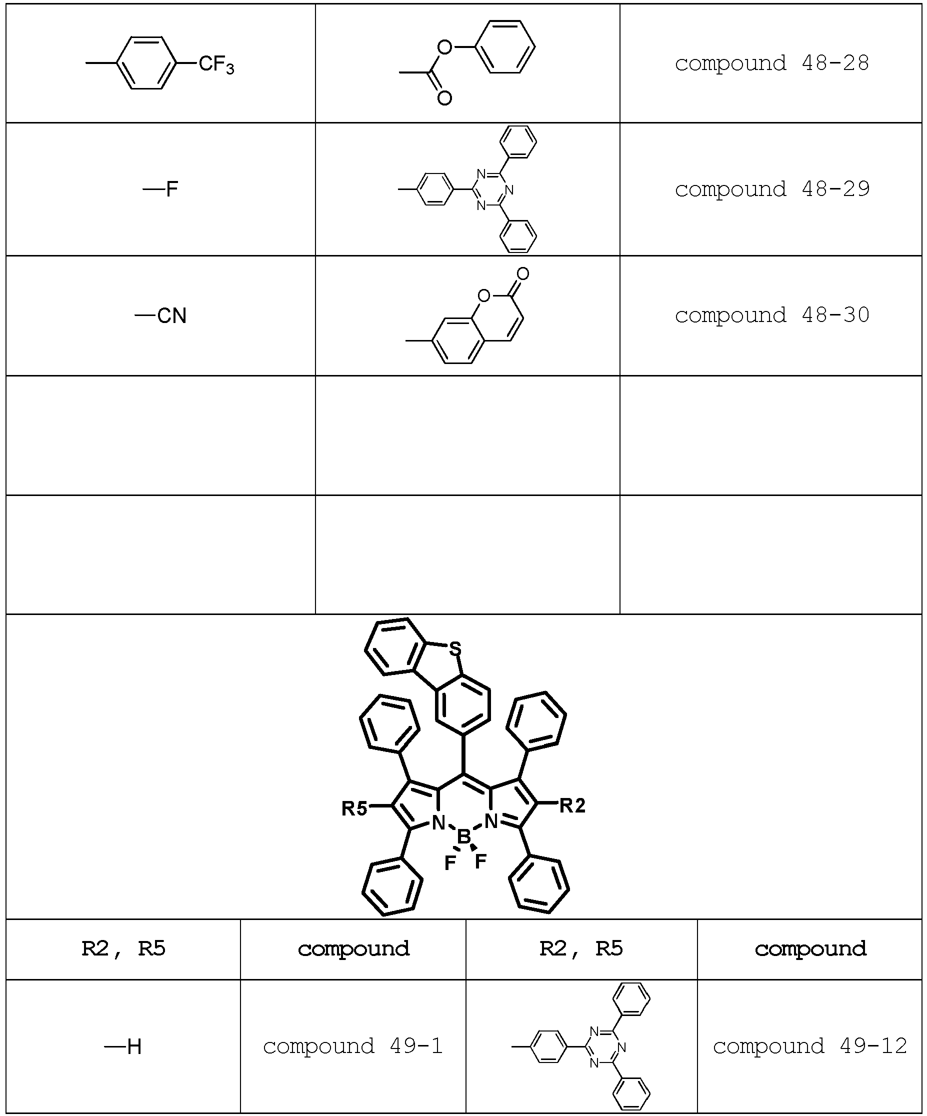

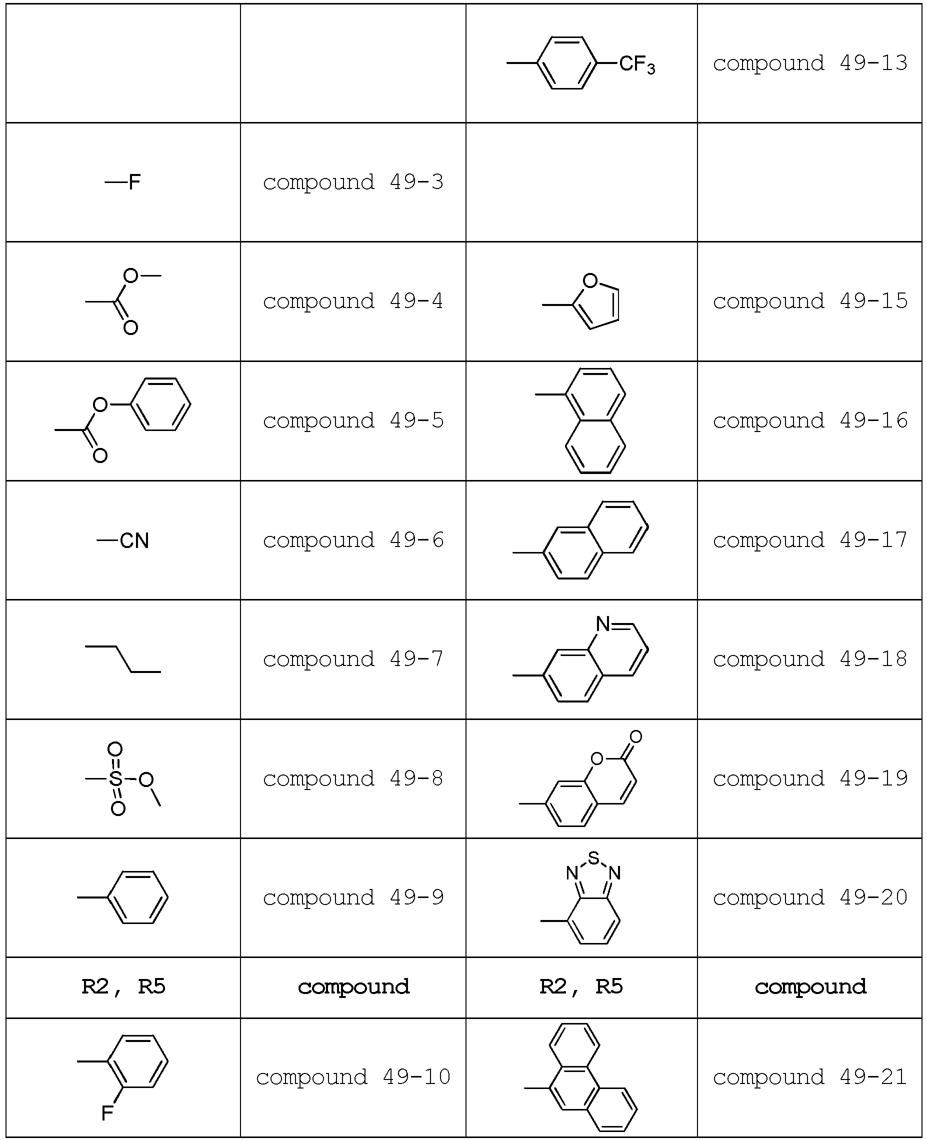

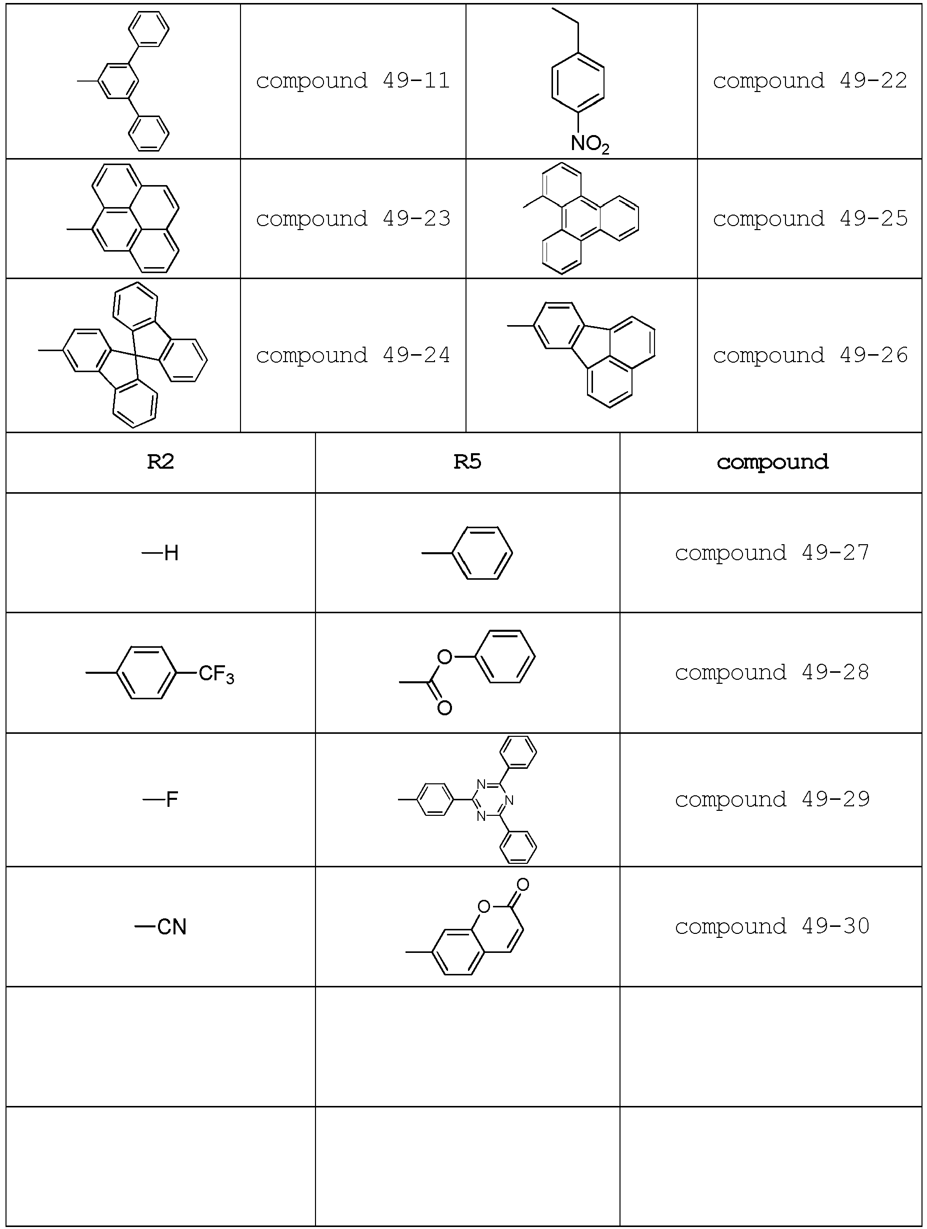

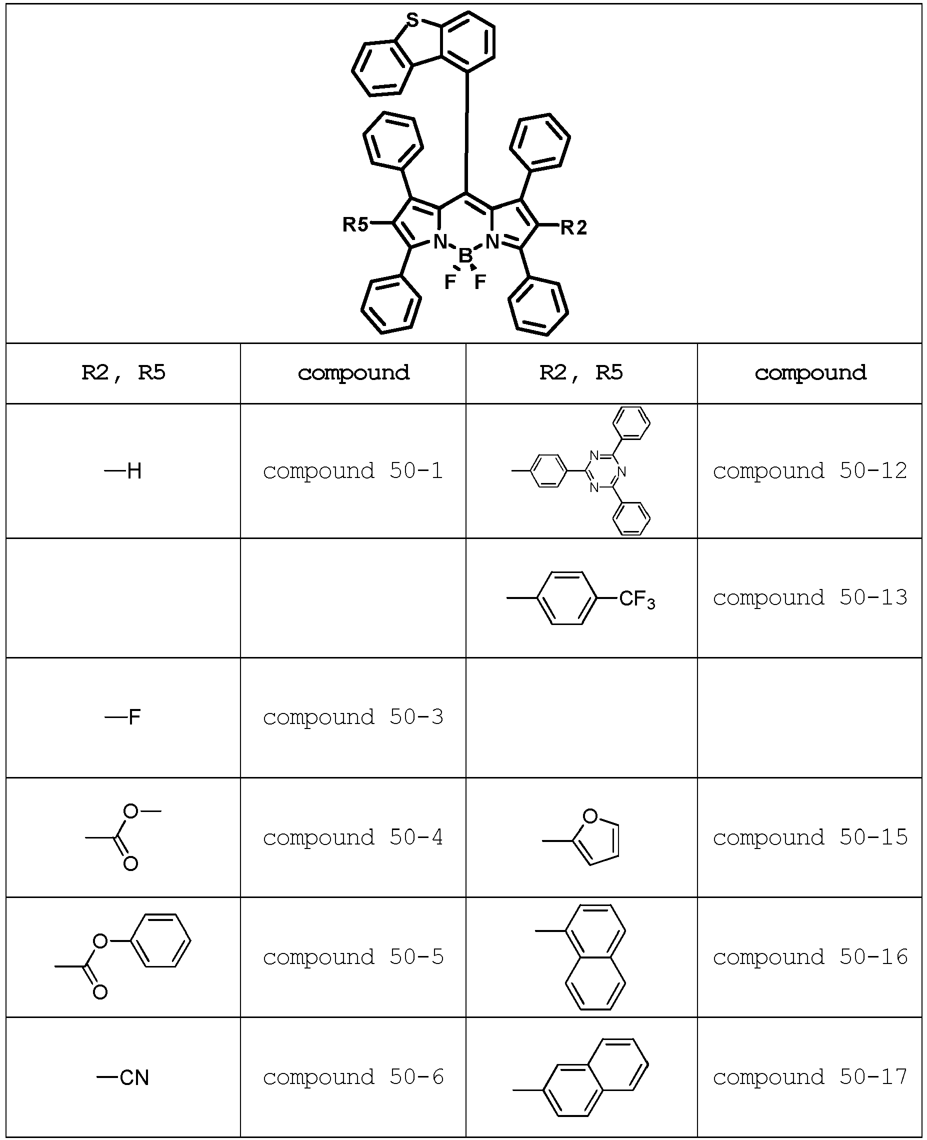

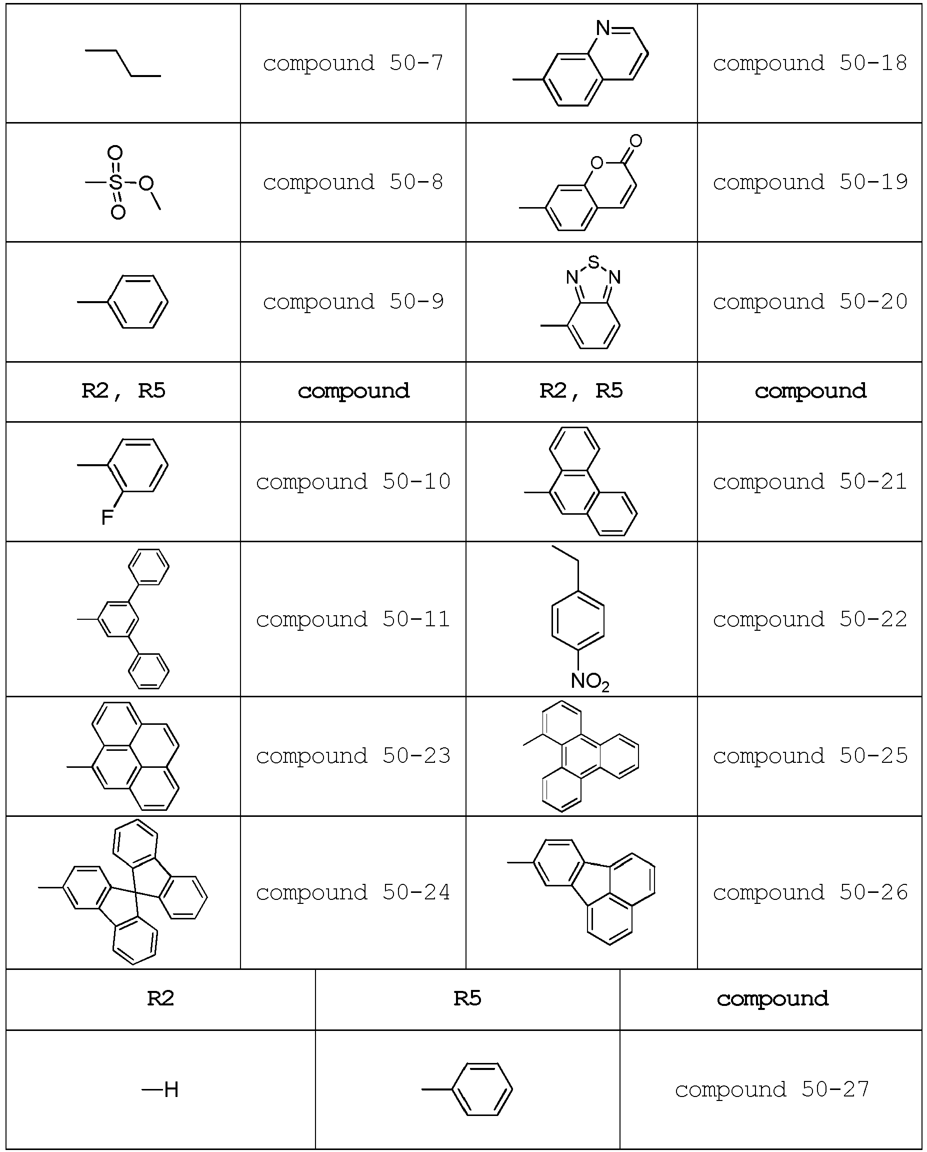

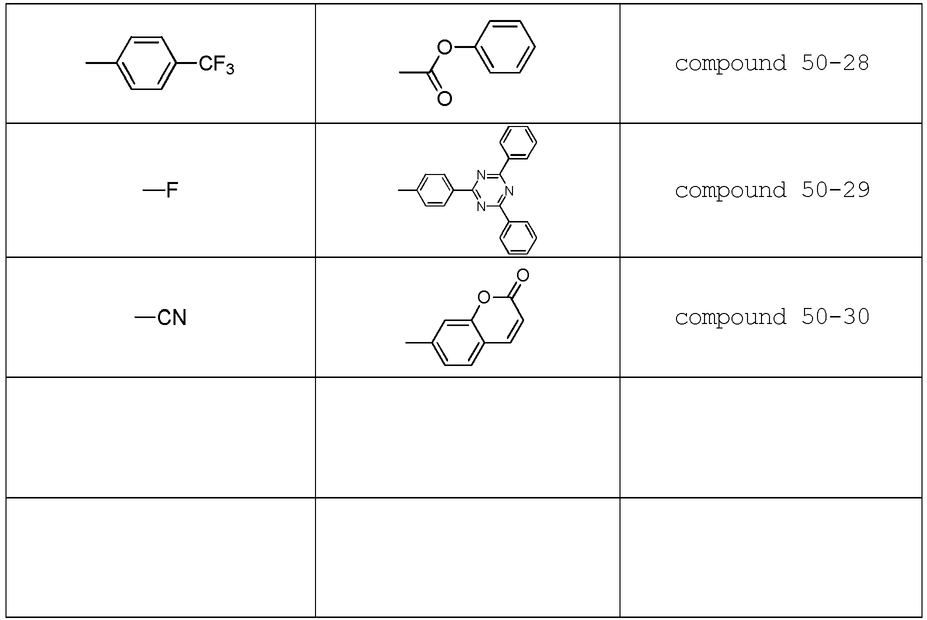

| | | | | | | | |
|---|---|---|---|---|---|---|---|
| 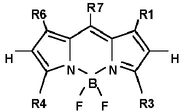 | | R7 | | | | | |
| R1, R6 | R3, R4 | 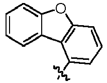 | 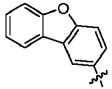 | 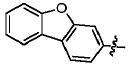 | 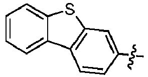 | 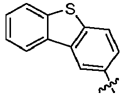 | 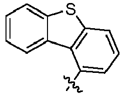 |
| 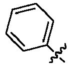 | 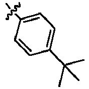 | compound 51-1 | compound 52-1 | compound 53-1 | compound 54-1 | compound 55-1 | compound 56-1 |
| | 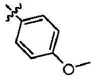 | compound 51-2 | compound 52-2 | compound 53-2 | compound 54-2 | compound 55-2 | compound 56-2 |
| | 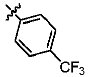 | compound 51-3 | compound 52-3 | compound 53-3 | compound 54-3 | compound 55-3 | compound 56-3 |
| | 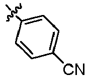 | compound 51-4 | compound 52-4 | compound 53-4 | compound 54-4 | compound 55-4 | compound 56-4 |
| 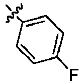 | 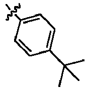 | compound 51-5 | compound 52-5 | compound 53-5 | compound 54-5 | compound 55-5 | compound 56-5 |
| | 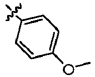 | compound 51-6 | compound 52-6 | compound 53-6 | compound 54-6 | compound 55-6 | compound 56-6 |
| | 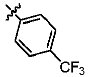 | compound 51-7 | compound 52-7 | compound 53-7 | compound 54-7 | compound 55-7 | compound 56-7 |
| | 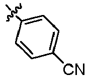 | compound 51-8 | compound 52-8 | compound 53-8 | compound 54-8 | compound 55-8 | compound 56-8 |
| 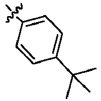 | 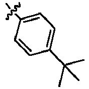 | compound 51-9 | compound 52-9 | compound 53-9 | compound 54-9 | compound 55-9 | compound 56-9 |
| | 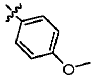 | compound 51-10 | compound 52-10 | compound 53-10 | compound 54-10 | compound 55-10 | compound 56-10 |
| | 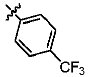 | compound 51-11 | compound 52-11 | compound 53-11 | compound 54-11 | compound 55-11 | compound 56-11 |
| | 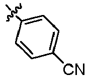 | compound 51-12 | compound 52-12 | compound 53-12 | compound 54-12 | compound 55-12 | compound 56-12 |

According to one embodiment of the present specification, the compound represented by Chemical Formula 1 may be prepared using general preparation methods as follows.

For example, the core structure of the compound represented by Chemical Formula 1-1 among the compounds represented by Chemical Formula 1 may be prepared using a method of the following General Formula 1, however, the method is not limited thereto.

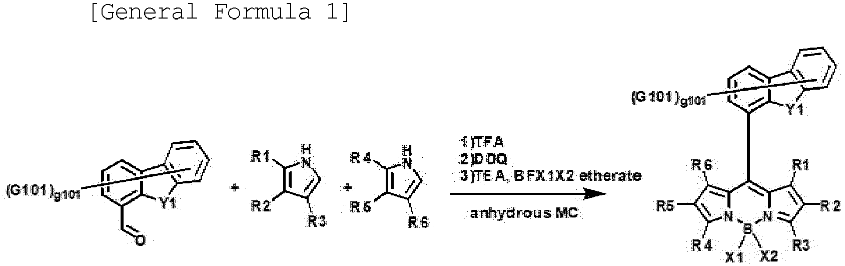

In General Formula 1,
X1, X2 and R1 to R6 have the same definitions as in Chemical Formula 1,
Y1 has the same definition as in Chemical Formula 2, and
G101 and g101 have the same definitions as in Chemical Formula 1-1.

One embodiment of the present specification provides a color conversion film including a resin matrix; and the compound represented by Chemical Formula 1 dispersed into the resin matrix.

The content of the compound represented by Chemical Formula 1 in the color conversion film may be in a range of 0.001% by weight to 10% by weight.

The color conversion film may include one type of the compound represented by Chemical Formula 1, or may include two or more types thereof. For example, the color conversion film may include one type of the compound emitting green light among the compounds represented by Chemical Formula 1. As another example, the color conversion film may include one type of the compound emitting red light among the compounds represented by Chemical Formula 1. As still another example, the color conversion film may include one type of the compound emitting green light and one type of the compound emitting red light among the compounds represented by Chemical Formula 1.

The color conversion film may further include additional fluorescent substances in addition to the compound represented by Chemical Formula 1. When using a light source emitting blue light, the color conversion film preferably includes both a green light emitting fluorescent substance and a red light emitting fluorescent substance. In addition, when using a light source emitting blue light and green light, the color conversion film may only include a red light emitting fluorescent substance. However, the color conversion film is not limited thereto, and even when using a light source emitting blue light, the color conversion film may only include a red light emitting compound when a separate film including a green light emitting fluorescent substance is laminated. On the other hand, even when using a light source emitting blue light, the color conversion film may only include a green light emitting compound when a separate film including a red light emitting fluorescent substance is laminated.

The color conversion film may further include a resin matrix; and an additional layer including a compound dispersed into the resin matrix and emitting light in a wavelength different from the wavelength of the compound represented by Chemical Formula 1. The compound emitting light in a wavelength different from the wavelength of the compound represented by Chemical Formula 1 may also be the compound represented by Chemical Formula 1, or may be other known fluorescent materials.

The resin matrix material is preferably a thermoplastic polymer or a thermocurable polymer. Specifically, a poly(meth)acryl-based such as polymethyl methacrylate (PMMA), a polycarbonate (PC)-based, a polystyrene (PS)-based, a polyarylene (PAR)-based, a polyurethane (TPU)-based, a styrene-acrylonitrile (SAN)-based, a polyvinylidene fluoride (PVDF)-based, a modified polyvinylidene fluoride (modified-PVDF)-based and the like may be used as the resin matrix material.

According to one embodiment of the present specification, the color conversion film according to the embodiments described above additionally includes light diffusing particles. By dispersing light diffusing particles into the color conversion film instead of a light diffusing film used in the art for enhancing luminance, higher luminance may be exhibited compared to using a separate light diffusing film, and an adhering process may be skipped as well.

As the light diffusing particles, particles having a high refractive index with the resin matrix may be used, and examples thereof may include TiO₂, silica, borosilicate, alumina, sapphire, air or other gases, air- or gas-filled hollow beads or particles (for example, air/gas-filled glass or polymers); polystyrene, polycarbonate, polymethyl methacrylate, acryl, methyl methacrylate, styrene, melamine resin, formaldehyde resin, or polymer particles including melamine and formaldehyde resins, or any suitable combination thereof.

The light diffusing particles may have particle diameters in a range of 0.1 micrometers to 5 micrometers, for example, in a range of 0.3 micrometers to 1 micrometer. The content of the light diffusing particles may be determined as necessary, and for example, may be in a range of approximately 1 part by weight to 30 parts by weight based on 100 parts by weight of the resin matrix.

The color conversion film according to the embodiments described above may have a thickness of 2 micrometers to 200 micrometers. Particularly, the color conversion film may exhibit high luminance even with a small thickness of 2 micrometers to 20 micrometers. This is due to the fact that the content of the fluorescent substance molecules included in the unit volume is higher compared to quantum dots.

The color conversion film according to the embodiments described above may have a substrate provided on one surface. This substrate may function as a support when preparing the color conversion film. Types of the substrate are not particularly limited, and the material or thickness is not limited as long as it is transparent and is capable of functioning as the support. Herein, being transparent means having visible light transmittance of 70% or more. For example, a PET film may be used as the substrate.

The color conversion film described above may be prepared by coating a resin solution in which the compound represented by Chemical Formula 1 described above is dissolved on a substrate and drying the result, or by extruding and filming the compound represented by Chemical Formula 1 described above together with a resin.

The compound represented by Chemical Formula 1 is dissolved in the resin solution, and therefore, the compound represented by Chemical Formula 1 is uniformly distributed in the solution. This is different from a quantum dot film preparation process that requires a separate dispersion process.

As for the resin solution in which the compound represented by Chemical Formula 1 is dissolved, the preparation method is not particularly limited as long as the compound represented by Chemical Formula 1 and the resin described above are dissolved in the solution.

According to one example, the resin solution in which the compound represented by Chemical Formula 1 is dissolved may be prepared using a method of preparing a first solution by dissolving the compound represented by Chemical Formula 1 in a solvent, preparing a second solution by dissolving a resin in a solvent, and mixing the first solution and the second solution. When mixing the first solution and the second solution, it is preferable that these be uniformly mixed. However, the method is not limited thereto, and a method of simultaneously adding and dissolving the compound represented by Chemical Formula 1 and a resin in a solvent, a method of dissolving the compound represented by Chemical Formula 1 in a solvent and subsequently adding and dissolving a resin, a method of dissolving a resin in a solvent and then subsequently adding and dissolving the compound represented by Chemical Formula 1, and the like, may be used.

As the resin included in the solution, the resin matrix material described above, a monomer curable to this resin matrix resin, or a mixture thereof, may be used. For example, the monomer curable to the resin matrix resin includes a (meth) acryl-based monomer, and this may be formed to a resin matrix material by UV curing. When using such a curable monomer, an initiator required for curing may be further added as necessary.

The solvent is not particularly limited as long as it is capable of being removed by drying afterword while having no adverse effects on the coating process. Non-limiting examples of the solvent may include toluene, xylene, acetone, chloroform, various alcohol-based solvents, methylethyl ketone (MEK), methylisobutyl ketone (MIBK), ethyl acetate (EA), butyl acetate, dimethylformamide (DMF), dimethylacetamide (DMAc), dimethyl sulfoxide (DMSO), N-methyl-pyrrolidone (NMP) and the like, and one type or a mixture of two or more types may be used. When the first solution and the second solution are used, solvents included in each of the solutions may be the same as or different from each other. Even when different types of solvents are used in the first solution and the second solution, these solvents preferably have compatibility so as to be mixed with each other.

The process of coating the resin solution in which the compound represented by Chemical Formula 1 is dissolved on a substrate may use a roll-to-roll process. For example, a process of unwinding a substrate from a substrate-wound roll, coating the resin solution in which the compound represented by Chemical Formula 1 is dissolved on one surface of the substrate, drying the result, and then winding the result again on the roll may be used. When a roll-to-roll process is used, viscosity of the resin solution is preferably determined in a range capable of carrying out the process, and for example, may be determined in a range of 200 cps to 2,000 cps.

As the coating method, various known methods may be used, and for example, a die coater may be used, or various bar coating methods such as a comma coater and a reverse comma coater may be used.

After the coating, a drying process is carried out. The drying process may be carried out under a condition required to remove a solvent. For example, a color conversion film including a fluorescent substance including the compound represented by Chemical Formula 1 having target thickness and concentration may be obtained on a substrate by carrying out the drying in an oven located close to a coater under a condition to sufficiently evaporate a solvent, in a direction of the substrate progressing during the coating process.

When a monomer curable to the resin matrix resin is used as the resin included in the solution, curing, for example, UV curing, may be carried out prior to or at the same time as the drying.

When the compound represented by Chemical Formula 1 is filmed by being extruded with a resin, extrusion methods known in the art may be used, and for example, the color conversion film may be prepared by extruding the compound represented by Chemical Formula 1 with a resin such as a polycarbonate (PC)-based, a poly(meth)acryl-based and a styrene-acrylonitrile (SAN)-based.

According to one embodiment of the present specification, the color conversion film may have a protective film or a barrier film provided on at least one surface. As the protective film or the barrier film, those known in the art may be used.

One embodiment of the present specification provides a backlight unit including the color conversion film described above. The backlight unit may have backlight unit constitutions known in the art except for including the color conversion film. FIG. 1 is a mimetic diagram of a backlight unit structure according to one embodiment. The backlight unit according to FIG. 1 includes a side chain-type light source (101), a reflecting plate (102) surrounding the light source, a light guide plate (103) either directly emitting light from the light source or inducing light reflected from the reflecting plate, a reflective layer (104) provided on one surface of the light guide plate, and a color conversion film (105) provided on a surface of the light guide plate opposite to a surface facing the reflecting plate. A part marked in grey in FIG. 1 is a light dispersion pattern (106) of the light guide plate. Light entering into the light guide plate has non-uniform light distribution due to the repetition of optical processes such as reflection, total-reflection, refraction and transmission, and in order to induce this non-uniform light distribution to uniform brightness, a two-dimensional light dispersion pattern may be used. However, the scope of the present disclosure is not limited to FIG. 1, and a direct type as well as a side chain type may be used as the light source, and the reflecting plate or the reflective layer may not be included or may be replaced with other constituents as necessary, and when necessary, additional films such as a light diffusing film, a light concentrating film and a luminance enhancing film may be further provided.

One embodiment of the present specification provides a display apparatus including the backlight unit. The display apparatus is not particularly limited as long as it includes the backlight unit, and may be included in TVs, computer monitors, laptops, mobile phones and the like.

Hereinafter, the present specification will be described in detail with reference to examples. However, the examples according to the present specification may be modified to various other forms, and the scope of the present specification is not construed to be limited to the examples described below. The examples of the present specification are provided for more completely describing the present specification to those having average knowledge in the art.

### <General Synthesis of Pyrrole>

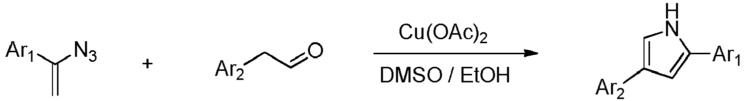

1 equivalent of aldehyde and 1.5 equivalents of azide were introduced to a solvent, approximately 2% to 5% of a catalyst was added thereto, and the result was heated and stirred at 110°C under argon. After the reaction was terminated, the result was extracted using water and ethyl acetate, and water was removed using anhydrous magnesium sulfate. The result was concentrated through vacuum distillation, and then purified through a column.

The synthesis referred to [Org. Lett., 2012, 14 (18), pp 4926-4929].

### <Preparation Example 1. Preparation of Compound 2-1>

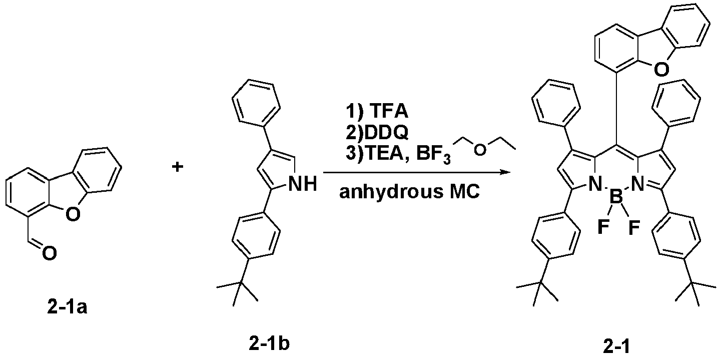

1 g (5.09 mmol, 1 equivalent) of Compound 2-1a and 2.2 equivalents of Compound 2-1b were introduced to an anhydrous methylene chloride solvent, and a catalyst amount of trifluoroacetic acid was added thereto while stirring. The reaction procedure was checked through thin layer chromatography (TLC) and after identifying the disappearance of 2-1a, the temperature was lowered to 0°C, and 1.1 equivalents of 2,3-dichloro-5,6-dicyanobenzoquinone (DDQ) was slowly added thereto. After the reaction was completed, DDQ was removed using a 0.1 M solution of sodium hydroxide. The solvent was removed through vacuum distillation, and then 4 equivalents of triethylamine and 6 equivalents of boron trifluoride diethyl ether were introduced thereto at 0°C under an anhydrous methylene chloride solvent again. After the reaction was terminated, the result was extracted using water and a methylene chloride solvent, water was removed using anhydrous magnesium sulfate, and then the result was filtered using celite. The solvent was vacuum distilled and the result was recrystallized with a methanol solvent to obtain 2.5 g (yield 63%) of Compound 2-1.

HR LC/MS/MS m/z calculated for C₅₃H₄₅BF₂N₂O (M+) : 774.3593; found: 774.3597

### <Preparation Example 2. Preparation of Compound 4-9>

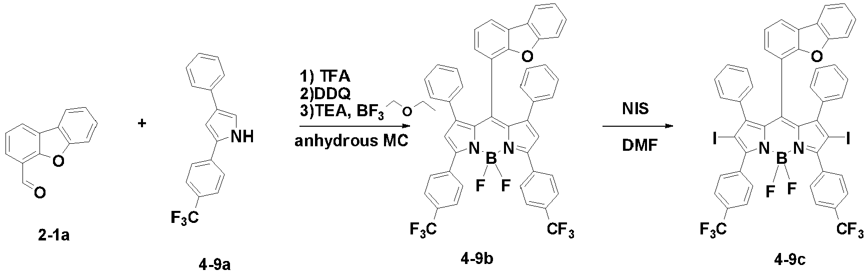

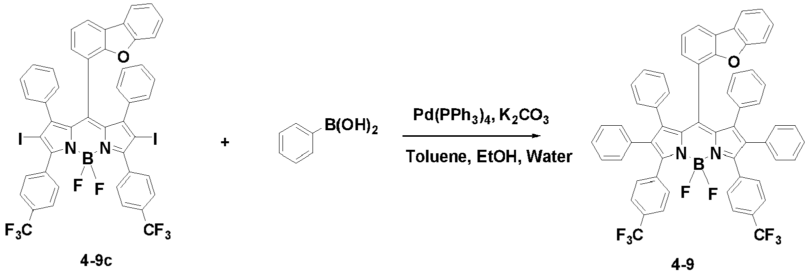

### 1) Preparation of Compound 4-9b

Preparation was carried out in the same manner as in Preparation Example 1 except that Compound 4-9 was used instead of Compound 2-1b.

2.4 g (60% yield) of Compound 4-9b was obtained.

### 2) Preparation of Compound 4-9c

2.4 g (3.00 mmol, 1 equivalent) of Compound 4-9b was introduced to a dimethylformamide solvent, and 3 equivalents of N-iodosuccinimide (NIS) was slowly added thereto while stirring, and the result was heated and stirred. After the reaction was terminated, the result was extracted with a sodium thiosulfate solution and a sodium bicarbonate solution, and water was removed using anhydrous magnesium sulfate. The result was filtered using silica gel, the solvent was removed through vacuum distillation, and the result was recrystallized using methanol to obtain 2.7 g (yield 87%) of Compound 4-9c.

### 3) Preparation of Compound 4-9

2.7 g (2.57 mmol, 1 equivalent) of Compound 4-9c and 2.2 equivalents of phenylboronic acid were stirred under toluene and ethanol solvents, and 3 equivalents of potassium carbonate dissolved in water was added thereto. The reaction was progressed using 0.03 equivalents of tetrakistriphenylphosphine as a catalyst. After the reaction was terminated, the result was cooled to room temperature, and the water layer and the organic layer were separated. The organic layer was extracted using water and chloroform, water was removed using anhydrous magnesium sulfate, and the result was filtered using celite. The solvent was removed through vacuum distillation, and the result was purified through a column. After the column purification, 2.2 g (yield 91%) of Compound 4-9 was obtained.

HR LC/MS/MS m/z calculated for C₅₉H₃₅BF₈N₂O (M+) : 950.2715; found: 950.2719

### <Preparation Example 3. Preparation of Compound 7-1>

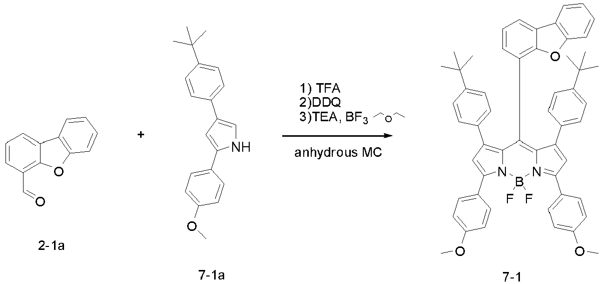

Preparation was carried out in the same manner as in Preparation Example 1 except that Compound 7-1a was used instead of Compound 2-1b. 2.5 g (yield 59%) of Compound 7-1 was obtained.

HR LC/MS/MS m/z calculated for C₅₅H₄₉BF₂N₂O₃ (M+) : 834.3804; found: 834.3807

### <Preparation Example 4. Preparation of Compound 8-1>

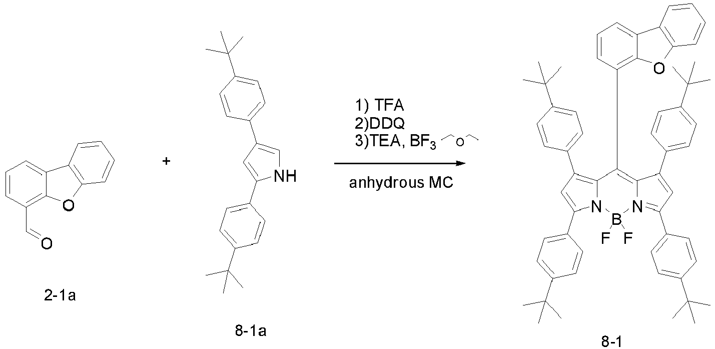

Preparation was carried out in the same manner as in Preparation Example 1 except that Compound 8-1a was used instead of Compound 2-1b. 2.9 g (yield 65%) of Compound 8-1 was obtained.

HR LC/MS/MS m/z calculated for C₆₁H₆₁BF₂N₂O (M+) : 886.4845; found: 886.4851

### <Preparation Example 5. Preparation of Compound 9-19>

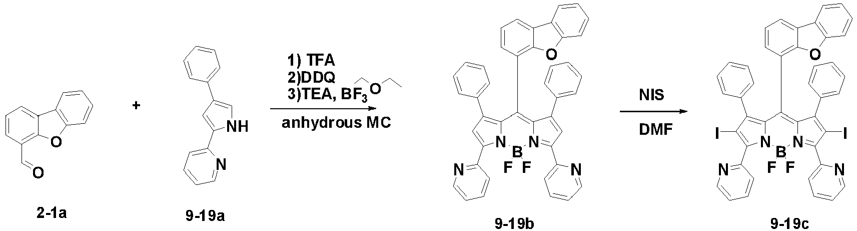

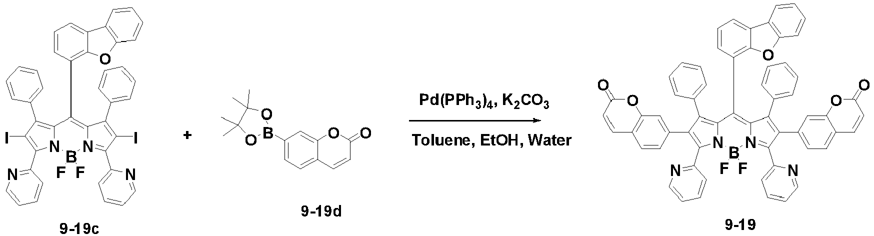

### 1) Preparation of Compound 9-19b

Preparation was carried out in the same manner as in Preparation Example 1 except that Compound 9-19a was used instead of Compound 2-1b. 2.9 g (yield 65%) of Compound 9-19b was obtained.

### 2) Preparation of Compound 9-19c

Preparation was carried out in the same manner as in 2) Preparation of Compound 4-9c of Preparation Example 2 except that Compound 9-19b was used instead of Compound 4-9b. 2.5 g (yield 85%) of Compound 9-19c was obtained.

### 3) Preparation of Compound 9-19

Preparation was carried out in the same manner as in 3) Preparation of Compound 4-9 of Preparation Example 2 except that Compound 9-19c was used instead of Compound 4-9c. 2.3 g (yield 89%) of Compound 9-19 was obtained.

HR LC/MS/MS m/z calculated for C₆₁H₃₅BF₂N₄O₅ (M+): 952.2669; found: 952.2680

### <Preparation Example 6. Preparation of Compound 1-5>

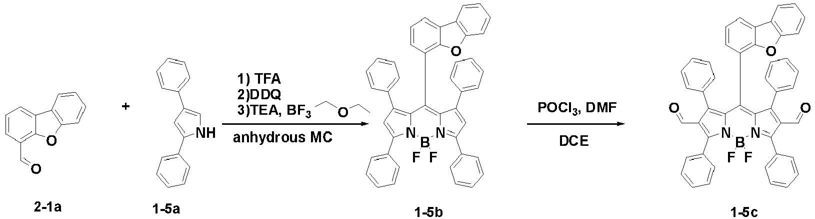

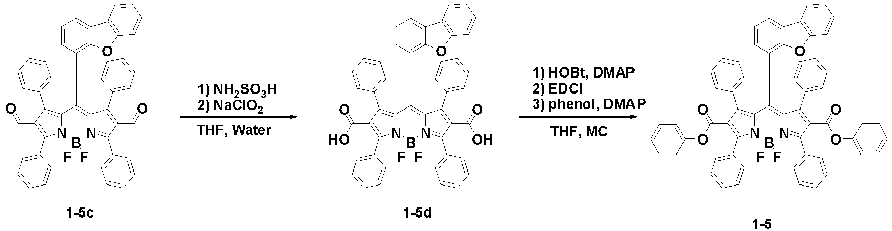

### 1) Preparation of Compound 1-5b

Preparation was carried out in the same manner as in Preparation Example 1, except that 3 g (1 equivalent) of Compound 2-1a was used and Compound 1-5a was used instead of Compound 2-1b. 6.5 g (yield 64%) of Compound 1-5b was obtained.

### 2) Preparation of Compound 1-5c

5 equivalents of POCl₃ and 5 equivalents of dimethylformamide (DMF) were introduced to a dichloroethane solvent under N₂ at 0°C, and the result was stirred for approximately 1 hour at room temperature. 6.5 g (1 equivalent) of Compound 1-5b was slowly added thereto, and the mixture was heated to approximately 70°C and stirred. TLC was checked with the mixture washed with a sodium bicarbonate solution. After the reaction was terminated, the result was cooled to room temperature, and a sodium bicarbonate solution was added thereto until the pH indicated basic from neutral. After adjusting the pH, the result was extracted using water a chloroform solvent, water was removed from the organic layer using anhydrous magnesium sulfate, and the solvent was removed through vacuum distillation. After removing the solvent, the result was recrystallized using a small amount of methyl tertiary butyl ether solvent. 5.7 g (yield 82%) of Compound 1-5c was obtained.

### 3) Preparation of Compound 1-5d

After dissolving 5.7 g (1 equivalent) of Compound 1-5c in a tetrahydrofuran (THF) solvent and water with 3 equivalents of NH₂SO₃H, the result was stirred at room temperature. After approximately 30 minutes, 1.2 equivalents of sodium chloride was dissolved in water, and the result was added to the mixture at 0°C. The reaction was checked with TLC, and after the reaction was terminated, the result was washed with a sodium thiosulfate solvent and then extracted using chloroform. Water was removed from the organic layer using anhydrous magnesium sulfate, and the solvent was removed through vacuum distillation. The result was recrystallized using a hexane solvent to obtain 4.2 g (yield 72%) of Compound 1-5d.

### 4) Preparation of Compound 1-5

4.2 g (1 equivalent) of Compound 1-5d, 1.2 equivalents of HOBt and 2 equivalents of 4-dimethylaminopyridine (DMAP) were introduced to tetrahydrofuran (THF) and stirred, and 1.2 equivalents of 1-ethyl-3-(3-dimethylaminopropyl)carbodiimide (EDCI) dissolved in methylene chloride was added thereto. After identifying the disappearance of Compound 1-5d through TLC, 2 equivalents of phenol and 3 equivalents of DMAP were added thereto, and the result was heated and stirred. After the reaction was terminated, the result was washed using an ammonium chloride solution, and extracted using water and chloroform. Water was removed from the organic layer using anhydrous magnesium sulfate, and the solvent was removed through vacuum distillation. 3.5 g (yield 70%) of Compound 1-5 was obtained through column purification.

HR LC/MS/MS m/z calculated for C₅₇H₃₅BF₂N₄O₅ (M+): 904.2669; found: 904.2648

### <Preparation Example 7. Preparation of Compound 13-1>

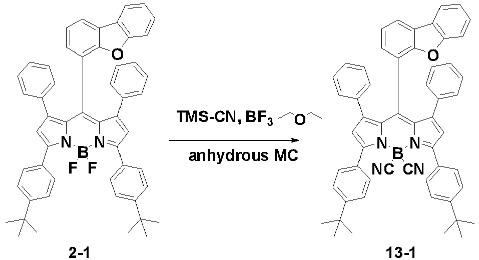

After dissolving 2 g (2.5 mmol, 1 equivalent) of Compound 2-1 in anhydrous methylene chloride, 10 equivalents of trimethylsilyl cyanide was added thereto under N₂ atmosphere, and then 2 equivalents of trifluoroboron ethyl ether was slowly added thereto. The reaction was checked through high-performance liquid chromatography (HPLC), and after the reaction was terminated, the result was washed with a sodium bicarbonate solution. The result was extracted with chloroform and water, and water was removed from the organic layer using anhydrous magnesium sulfate. The solvent was removed through vacuum distillation, and the result was recrystallized using a small amount of methanol solvent. 1.7 g (yield 84%) of Compound 13-1 was obtained.

HR LC/MS/MS m/z calculated for C₅₅H₄₅BN₄O (M+): 788.3686; found: 788.3701

### <Preparation Example 8. Preparation of Compound 23-1>

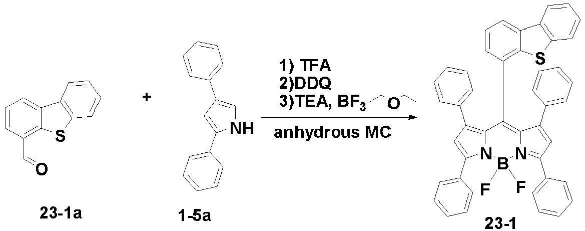

Preparation was carried out in the same manner as in Preparation Example 1, except that Compound 23-1a was used instead of Compound 2-1a and Compound 1-5a was used instead of Compound 2-1b. 1.9 g (yield 58%) of Compound 23-1 was obtained.

HR LC/MS/MS m/z calculated for C₄₇H₂₉BN₄S (M+): 692.2206; found: 692.2224

### <Preparation Example 9. Preparation of Compound 38-24>

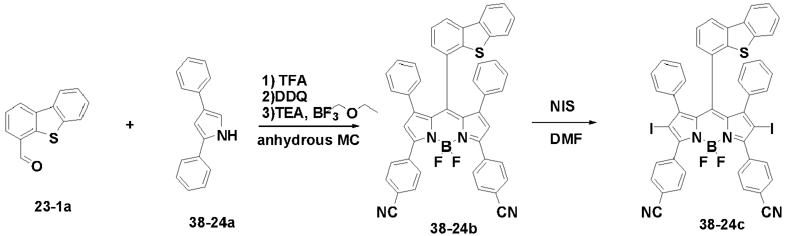

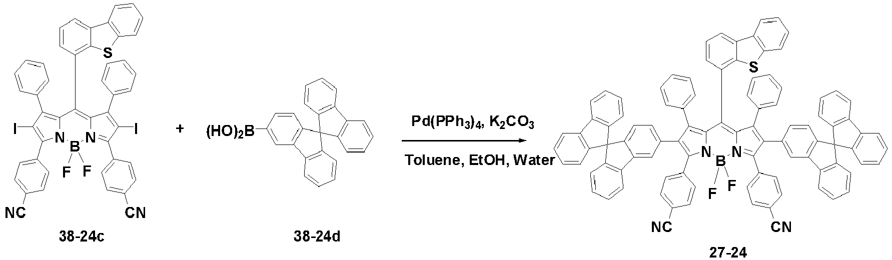

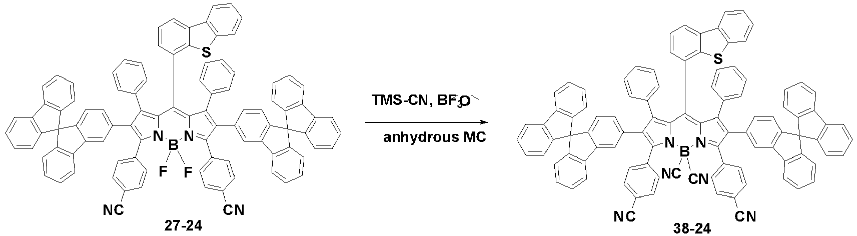

### 1) Preparation of Compound 38-24b

Preparation was carried out in the same manner as in Preparation Example 1, except that Compound 23-1a was used instead of Compound 2-1a and Compound 38-24a was used instead of Compound 2-1b. 2.1 g (yield 61%) of Compound 38-24b was obtained.

### 2) Preparation of Compound 38-24c

Preparation was carried out in the same manner as in 2) Preparation of Compound 4-9c of Preparation Example 2 except that Compound 38-24b was used instead of Compound 4-9b. 2 g (yield 75%) of Compound 38-24c was obtained.

### 3) Preparation of Compound 27-24

Preparation was carried out in the same manner as in 3) Preparation of Compound 4-9 of Preparation Example 2, except that Compound 38-24c was used instead of Compound 4-9c and Compound 38-24d was used instead of phenylboronic acid. 2.2 g (yield 81%) of Compound 27-24 was obtained.

### 4) Synthesis of Compound 38-24

Preparation was carried out in the same manner as in Preparation Example 7 except that Compound 27-24 was used instead of Compound 2-1. 1.7 g (yield 79%) of Compound 38-24 was obtained.

HR LC/MS/MS m/z calculated for C₉₉H₅₅BN₆S (M+): 1370.4302; found: 1370.4318

### <Preparation Example 10. Preparation of Compound 50-13>

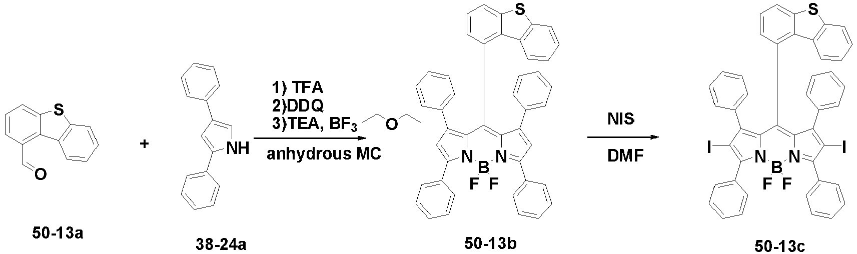

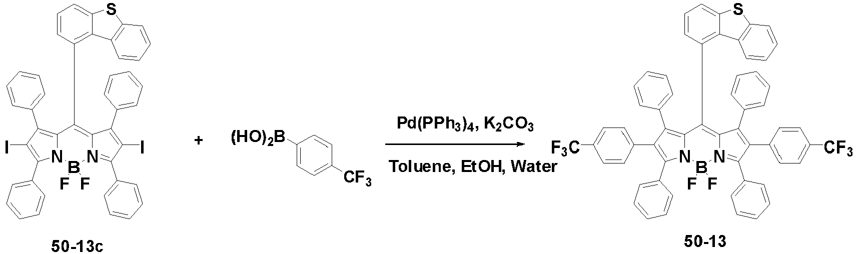

### 1) Preparation of Compound 50-13b

Preparation was carried out in the same manner as in Preparation Example 1, except that Compound 50-13a was used instead of Compound 2-1a and Compound 38-24a was used instead of Compound 2-1b. 2.0 g (yield 64%) of Compound 50-13b was obtained.

### 2) Preparation of Compound 50-13c

Preparation was carried out in the same manner as in 2) Preparation of Compound 4-9c of Preparation Example 2 except that Compound 50-13b was used instead of Compound 4-9b. 2.2 g (yield 83%) of Compound 50-13c was obtained.

### 3) Preparation of Compound 50-13

Preparation was carried out in the same manner as in 3) Preparation of Compound 4-9 of Preparation Example 2, except that Compound 50-13c was used instead of Compound 4-9c and 4-trifluoromethyl phenylboronic acid was used instead of phenylboronic acid. 2 g (yield 91%) of Compound 50-13 was obtained.

HR LC/MS/MS m/z calculated for C₅₉H₃₅BF₈N₂S (M+): 966.2486; found: 966.2503

### <Preparation Example 11. Preparation of Compound 51-2 >

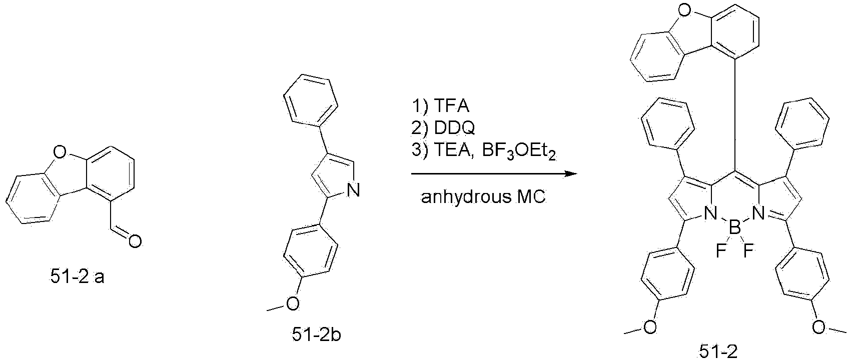

Preparation was carried out in the same manner as in Preparation Example 1, except that Compound 51-2a was used instead of Compound 2-1a and Compound 51-2b was used instead of Compound 2-1b. 5.1 g (yield 69%) of Compound 51-2 was obtained.

HR LC/MS/MS m/z calculated for C₄₇H₃₃BF₂N₂O₃ (M+): 722.5988; found: 722.5985

### <Preparation Example 12. Preparation of Compound 52-1>

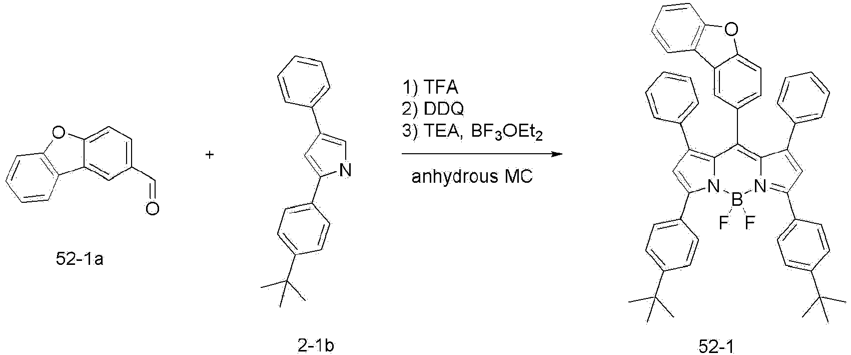

Preparation was carried out in the same manner as in Preparation Example 1 except that Compound 51-2a was used instead of Compound 2-1a. 5.7 g (yield 72%) of Compound 52-1 was obtained.

HR LC/MS/MS m/z calculated for C₅₃H₄₅BF₂N₂O (M+): 774.7628; found: 774.7632

### Example 1

A first solution was prepared by dissolving Compound 2-1 prepared in Preparation Example 1 (maximum absorption wavelength 581 nm, maximum light emission wavelength 617 nm and full width at half maximum 36 nm in toluene solution) in a xylene solvent.

A second solution was prepared by dissolving a thermoplastic resin SAN (styrene-acrylonitrile-based) in a xylene solvent. The first solution and the second solution were mixed so that the amount of the organic fluorescent substance was 0.5 parts by weight based on 100 parts by weight of the SAN, and the result was uniformly mixed. The solid content in the mixed solution was 20% by weight and viscosity was 200 cps. This solution was coated on a PET substrate, and the result was dried to prepare a color conversion film.

A luminance spectrum of the prepared color conversion film was measured using a spectroradiometer (SR series of TOPCON Corporation). Specifically, the prepared color conversion film was laminated on one surface of a light guide plate of a backlight unit including a LED blue backlight (maximum light emission wavelength 450 nm) and the light guide plate, and after laminating a prism sheet and a DBEF film on the color conversion film, a luminance spectrum of the film was measured. When measuring the luminance spectrum, an initial value was set so that the brightness of the blue LED light was 600 nit based on without the color conversion film.

### Example 2

An experiment was carried out in the same manner as in Example 1 except that Compound 4-9 (maximum absorption wavelength 574 nm, maximum light emission wavelength 607 nm and full width at half maximum 41 nm in toluene solution) was used instead of Compound 2-1.

### Example 3

An experiment was carried out in the same manner as in Example 1 except that Compound 7-1 (maximum absorption wavelength 595 nm, maximum light emission wavelength 630 nm and full width at half maximum 39 nm in toluene solution) was used instead of Compound 2-1.

### Example 4

An experiment was carried out in the same manner as in Example 1 except that Compound 8-1 (maximum absorption wavelength 587 nm, maximum light emission wavelength 623 nm and full width at half maximum 39 nm in toluene solution) was used instead of Compound 2-1.

### Example 5

An experiment was carried out in the same manner as in Example 1 except that Compound 9-19 (maximum absorption wavelength 589 nm, maximum light emission wavelength 625 nm and full width at half maximum 40 nm in toluene solution) was used instead of Compound 2-1.

### Example 6

An experiment was carried out in the same manner as in Example 1 except that Compound 1-5 (maximum absorption wavelength 578 nm, maximum light emission wavelength 611 nm and full width at half maximum 41 nm in toluene solution) was used instead of Compound 2-1.

### Example 7

An experiment was carried out in the same manner as in Example 1 except that Compound 13-1 (maximum absorption wavelength 580 nm, maximum light emission wavelength 615 nm and full width at half maximum 37 nm in toluene solution) was used instead of Compound 2-1.

### Example 8

An experiment was carried out in the same manner as in Example 1 except that Compound 23-1 (maximum absorption wavelength 579 nm, maximum light emission wavelength 620 nm and full width at half maximum 37 nm in toluene solution) was used instead of Compound 2-1.

### Example 9

An experiment was carried out in the same manner as in Example 1 except that Compound 38-24 (maximum absorption wavelength 597 nm, maximum light emission wavelength 639 nm and full width at half maximum 42 nm in toluene solution) was used instead of Compound 2-1.

### Example 10

An experiment was carried out in the same manner as in Example 1 except that Compound 50-13 (maximum absorption wavelength 584 nm, maximum light emission wavelength 624 nm and full width at half maximum 40 nm in toluene solution) was used instead of Compound 2-1.

### Example 11

An experiment was carried out in the same manner as in Example 1 except that Compound 51-2 (maximum absorption wavelength 586 nm, maximum light emission wavelength 623 nm and full width at half maximum 37 nm in toluene solution) was used instead of Compound 2-1.

### Example 12

An experiment was carried out in the same manner as in Example 1 except that Compound 52-1 (maximum absorption wavelength 574 nm, maximum light emission wavelength 610 nm and full width at half maximum 34 nm in toluene solution) was used instead of Compound 2-1.

### Comparative Example 1

An experiment was carried out in the same manner as in Example 1 except that pPhBODIPY having the following structural formula (maximum absorption wavelength 570 nm, maximum light emission wavelength 613 nm and full width at half maximum 42 nm in toluene solution) was used instead of Compound 2-1.

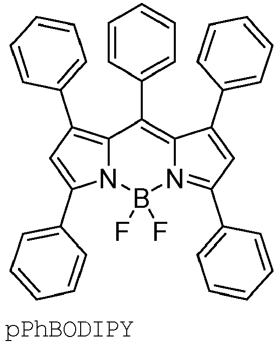

Properties of light emission obtained from irradiating light having a light emission peak at 450 nm, a full width at half maximum of 40 nm or less, and having monomodal light emission intensity distribution on the color conversion films obtained in Examples 1 to 12 and Comparative Example 1 are shown in the following Table 1. As shown in the following Table 1, Comparative Example 1 had lower quantum efficiency (QY) compared to Examples 1 to 12, and absorption intensity (Abs intensity) measured after 1000 hours greatly decreased in Comparative Example 1.

Accordingly, Examples 1 to 12 had high light emission efficiency and superior stability compared to Comparative Example 1.

**[Table 1]**

| | Compound | Film Light Emission Wavelength | | Quantum Efficiency (QY) (%) | Abs Intensity (1000 hr, %) |
|---|---|---|---|---|---|
| | | □λₘₐₓ (nm) | Full Width at Falf Maximum (nm) | | |
| Example 1 | 2-1 | 635 | 43 | 81 | 97.3 |
| Example 2 | 4-9 | 630 | 50 | 80 | 96.2 |
| Example 3 | 7-1 | 653 | 48 | 81 | 99.4 |
| Example 4 | 8-1 | 645 | 48 | 81 | 98.9 |
| Example 5 | 9-19 | 648 | 53 | 78 | 98.2 |
| Example 6 | 1-5 | 632 | 56 | 79 | 97.5 |
| Example 7 | 13-1 | 637 | 45 | 79 | 98.5 |
| Example 8 | 23-1 | 643 | 47 | 78 | 96.4 |
| Example 9 | 38-24 | 660 | 59 | 80 | 97.6 |
| Example 10 | 50-13 | 646 | 56 | 78 | 96.7 |
| Example 11 | 51-2 | 642 | 43 | 80 | 98.9 |
| Example 12 | 52-1 | 627 | 42 | 81 | 99.5 |
| Comparative Example 1 | pPhBODIPY | 605 | 58 | 75 | 93.0 |

## Claims

1. A compound represented by the following Chemical Formula 1: 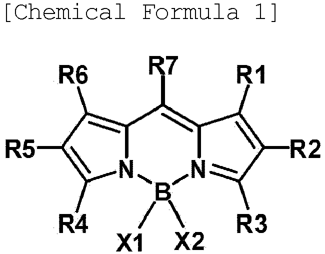 wherein, in Chemical Formula 1,
X1 and X2 are the same as or different from each other, and each independently a halogen group; a nitrile group; a substituted or unsubstituted alkyl group; or a substituted or unsubstituted alkoxy group;
R1, R3, R4 and R6 are the same as or different from each other, and each independently
a phenyl group unsubstituted or substituted with a nitrile group, a halogen group, an arylamine group, an alkoxy group or an alkyl group unsubstituted or substituted with a halogen group; a pyridyl group unsubstituted or substituted with an alkyl group; or a dibenzofuranyl group;
R2 and R5 are the same as or different from each other, and each independently
hydrogen; a fluoro group; a nitrile group; a methylester group; a phenylester group; a methylsulfoxy group; a methyl group substituted with a phenyl group substituted with a nitro group; an ethyl group; an n-propyl group; a coumarin group; a phenyl group unsubstituted or substituted with a fluoro group, a trifluoromethyl group, a phenyl group, a biphenyl group, or a triazinyl group substituted with a phenyl group; a biphenyl group substituted with a phenyl group; a terphenyl group; a pyrimidyl group; a furanyl group; a naphthyl group; a quinolyl group; a benzothiadiazolyl group; a phenanthrenyl group; a pyrenyl group; a triphenylenyl group; a spirobifluorenyl group; or a fluoranthenyl group;R7 is a group represented by the following Chemical Formula 2; 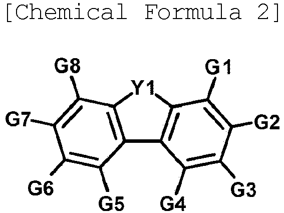
in Chemical Formula 2,
Y1 is O or S;
any one of G1 to G8 is a site bonding to Chemical Formula 1, and the rest are the same as or different from each other and each independently hydrogen; or adjacent groups bond to each other to form a ring substituted with R',
when adjacent groups among G1 to G8 bond to each other to form a ring substituted with R', any one of groups among G1 to G8 not forming the ring by the adjacent group bonding to each other and R' is a site bonding to Chemical Formula 1, and the rest of R' are hydrogen.

2. The compound of Claim 1, wherein Chemical Formula 2 is represented by any one of the following Chemical Formulae 2-1 to 2-3: 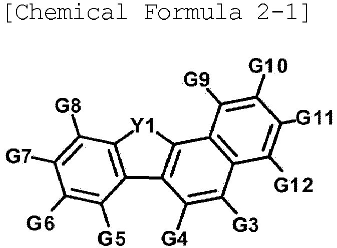 wherein, in Chemical Formula 2-1,
Y1 has the same definition as in Chemical Formula 2;
any one of G3 to G12 is a site bonding to Chemical Formula 1, and the rest are hydrogen 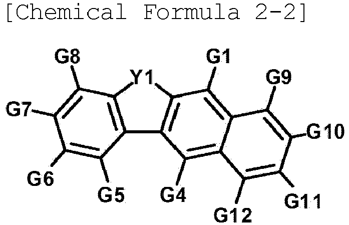
in Chemical Formula 2-2,
Y1 has the same definition as in Chemical Formula 2;
any one of G1 and G4 to G12 is a site bonding to Chemical Formula 1, and the rest are hydrogen 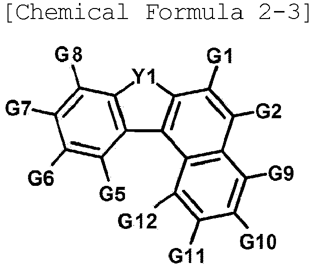
in Chemical Formula 2-3,
Y1 has the same definition as in Chemical Formula 2; and
any one of G1, G2 and G5 to G12 is a site bonding to Chemical Formula 1, and the rest are hydrogen.

3. The compound of Claim 1, wherein Chemical Formula 1 is represented by any one of the following Chemical Formulae 1-1 to 1-4: 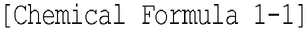 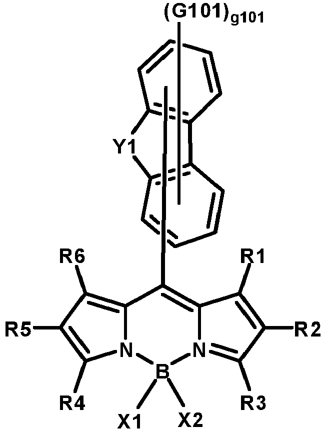 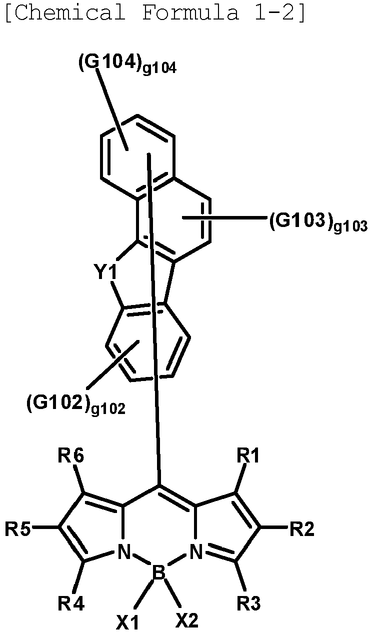 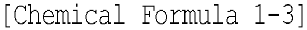 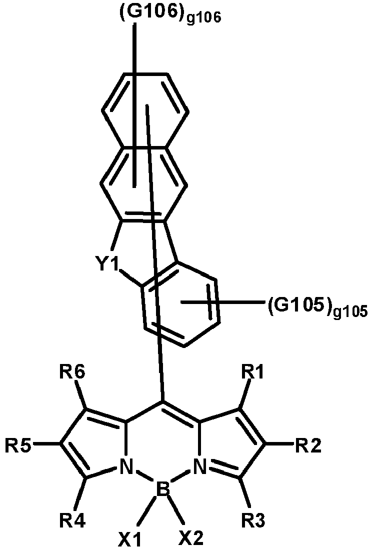 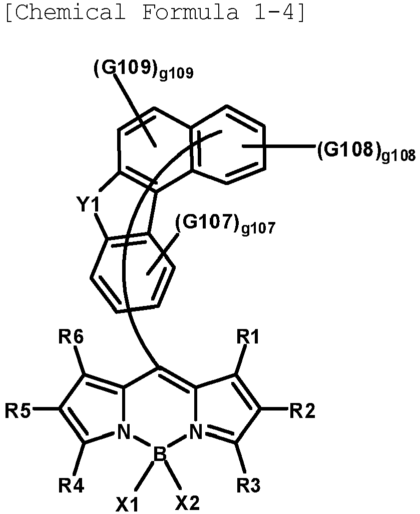 wherein, in Chemical Formulae 1-1 to 1-4,
R1 to R6, and X1 and X2 have the same definitions as in Chemical Formula 1;
Y1 has the same definition as in Chemical Formula 2;
G101 to G109 are hydrogen;
g101 is an integer of 1 to 7;
g102, g104, g105, g107 and g108 are each an integer of 1 to 4;
g103 and g109 are each 1 or 2;
g106 is an integer of 1 to 6;
3≤g102+g103+g104≤9;
2≤g105+g106≤9;
3≤g107+g108+g109≤9; and
when g101 to g109 are each a multiple number, structures in the parentheses are the same as or different from each other.

4. The compound of Claim 1, which has a maximum light emission peak present in 610 nm to 660 nm in a film state.

5. The compound of Claim 1, which has a maximum light emission peak present in 610 nm to 660 nm in a film state, and the light emission peak has a full width at half maximum of 60 nm or less.

6. The compound of Claim 1, which has quantum efficiency of 0.76 or greater.

7. The compound of Claim 1, wherein Chemical Formula 1 is selected from among the following compounds: 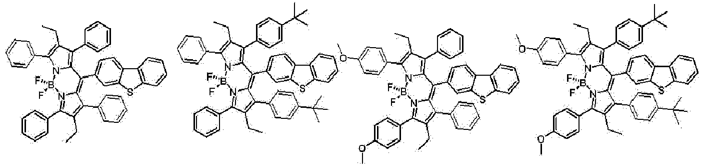 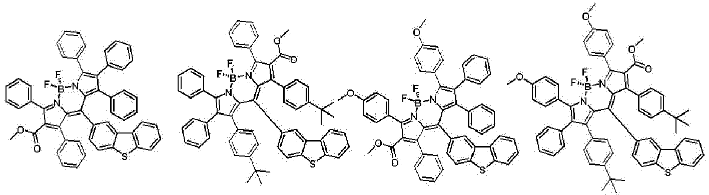 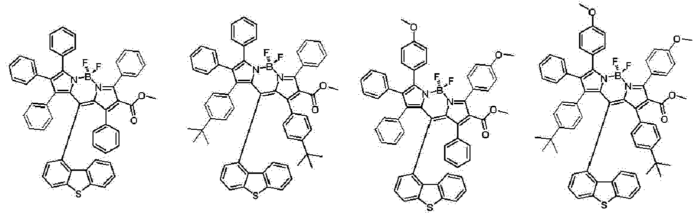 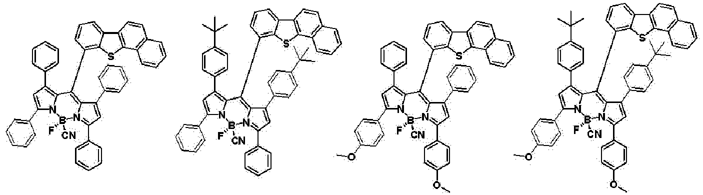 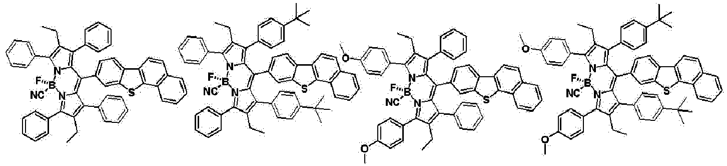 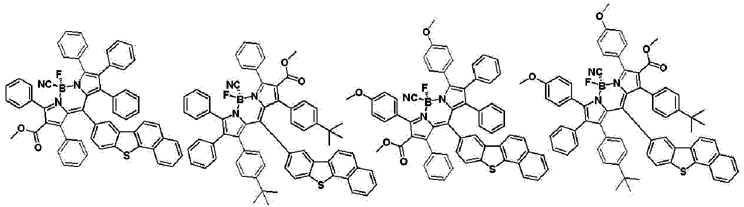 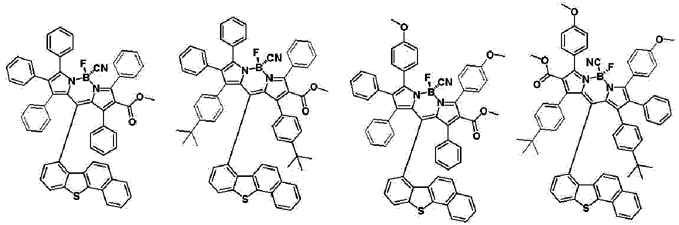 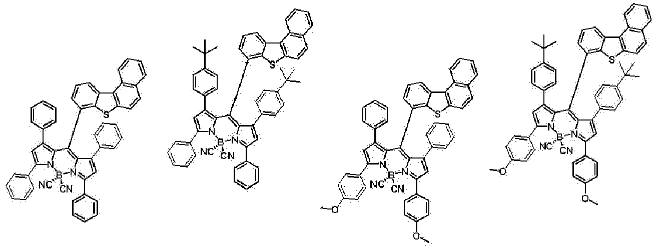 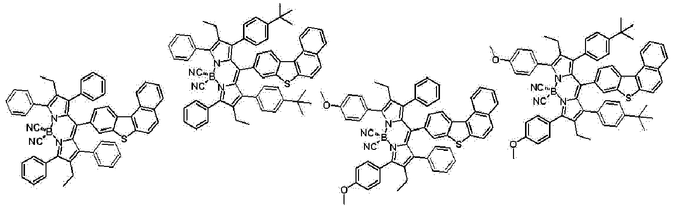 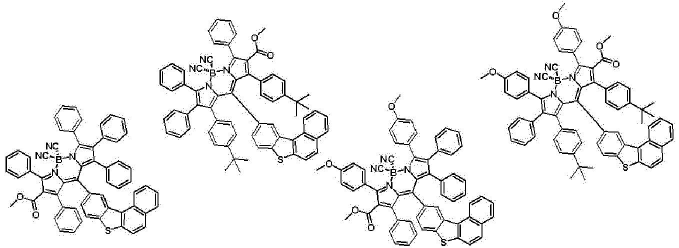 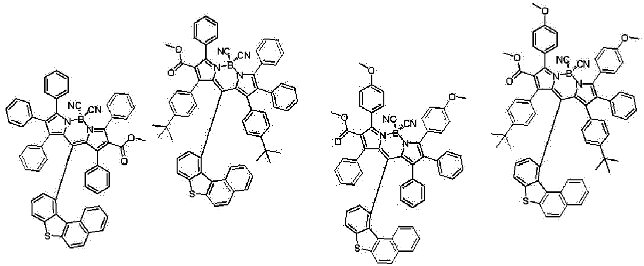 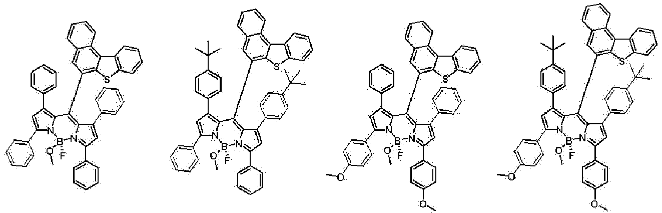 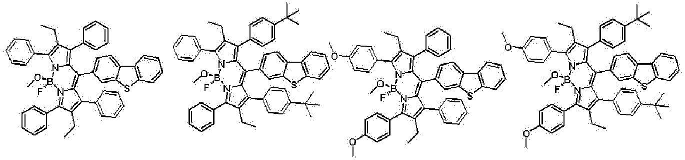 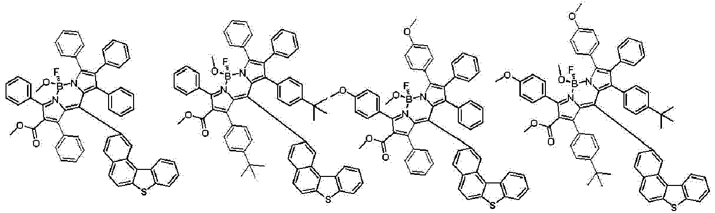 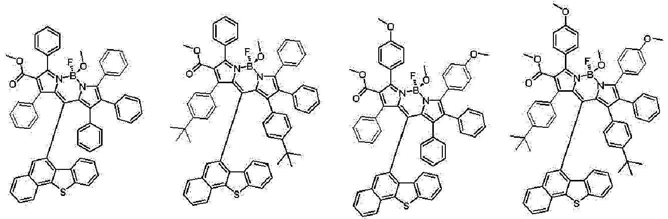 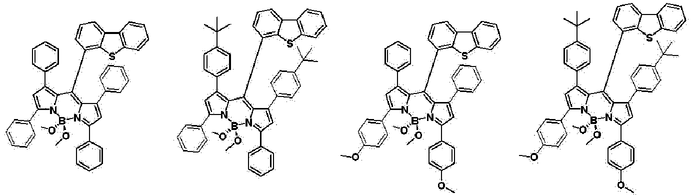 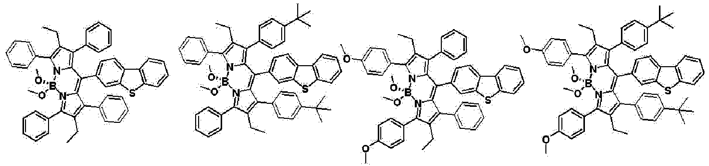 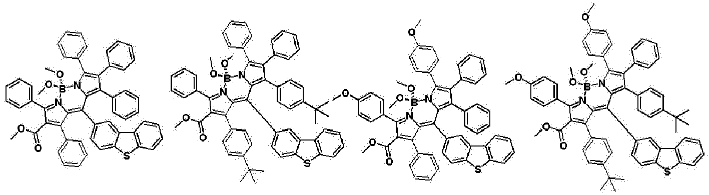 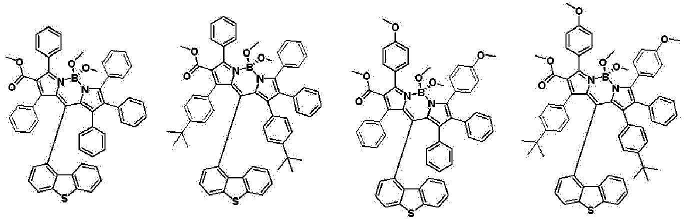 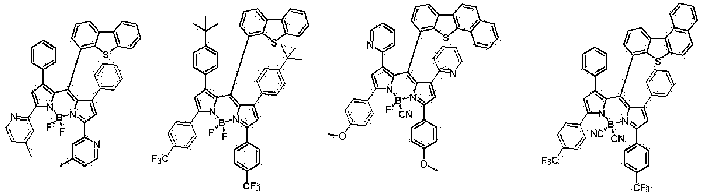 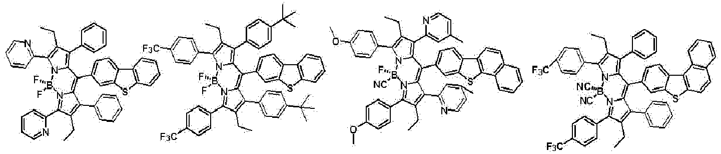 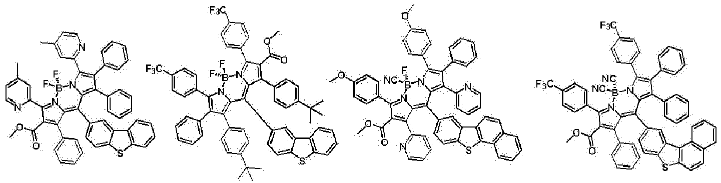 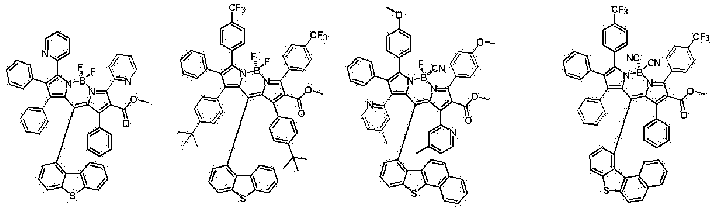 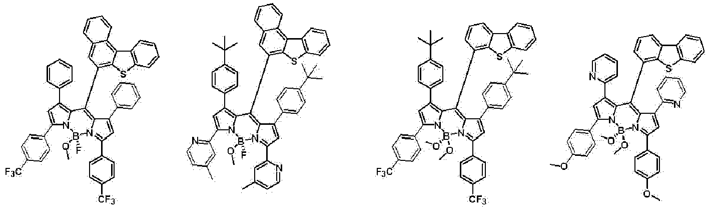 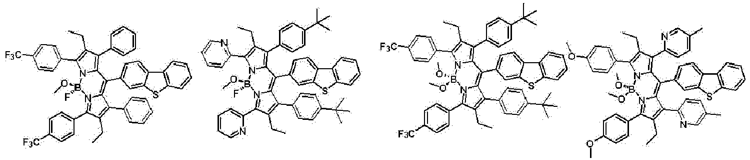 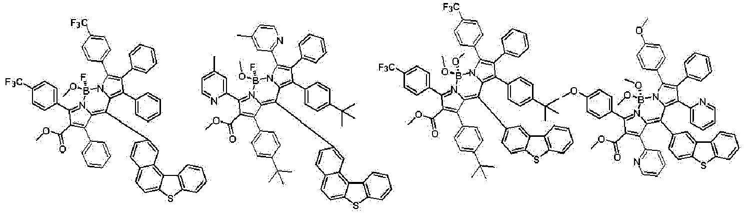 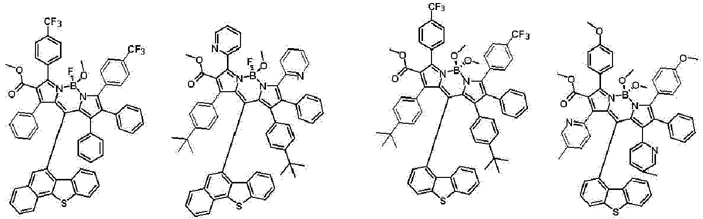 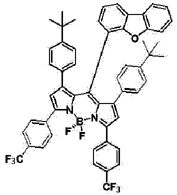 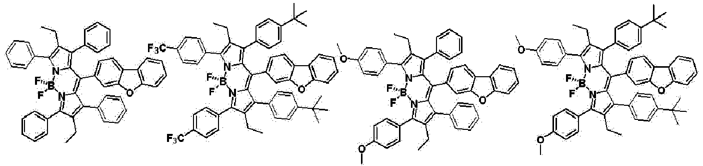 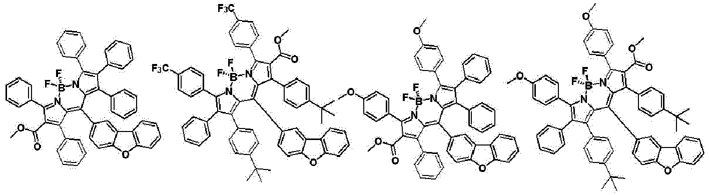 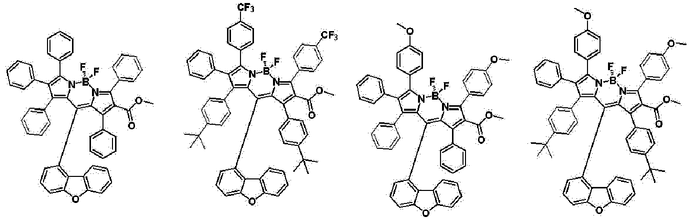 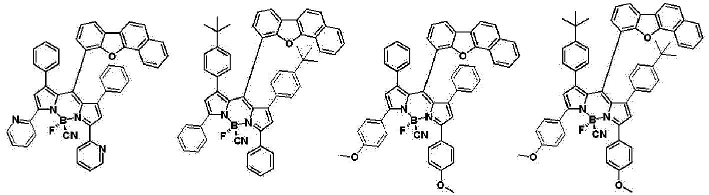 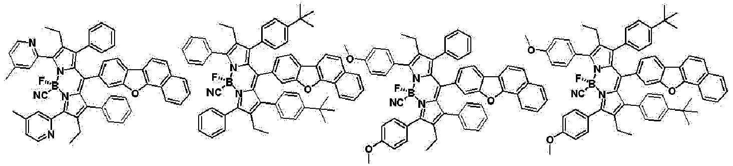 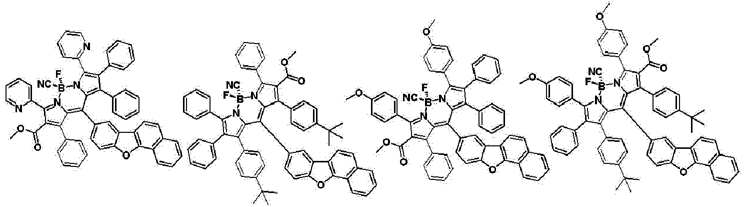 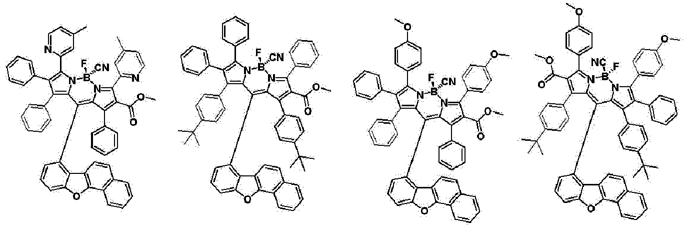 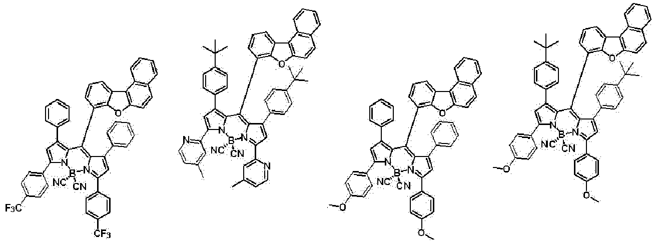 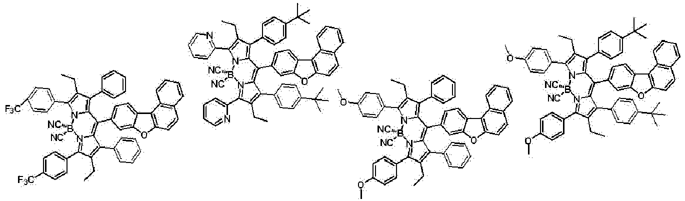 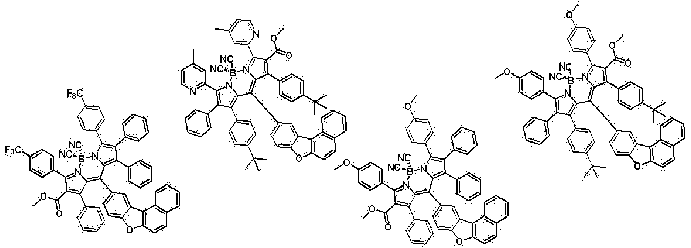 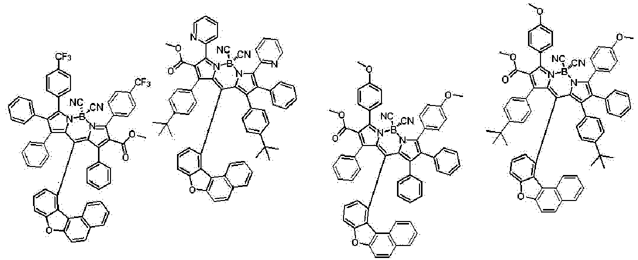 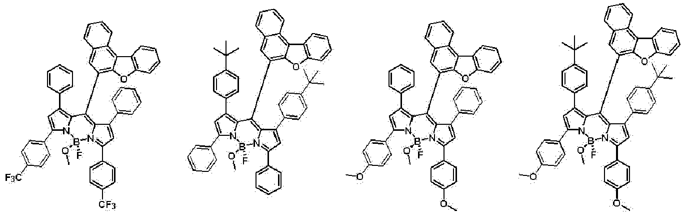 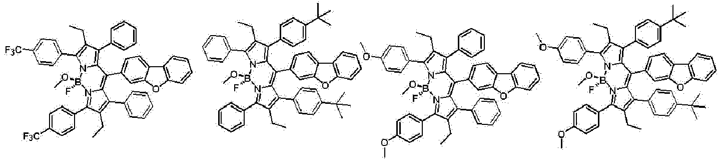 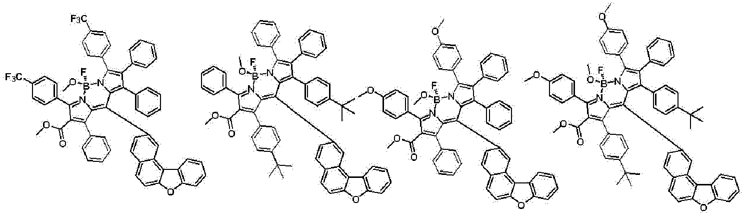 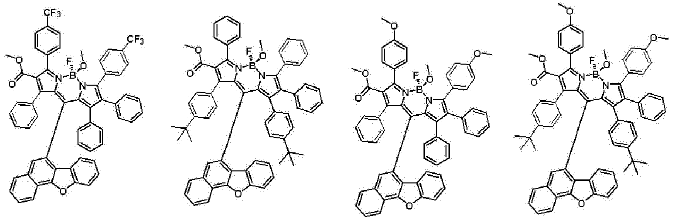 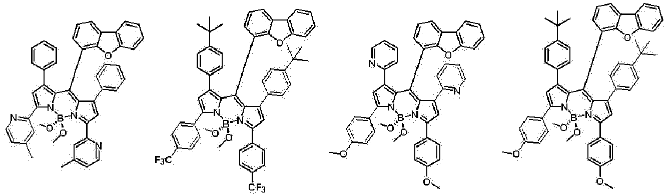 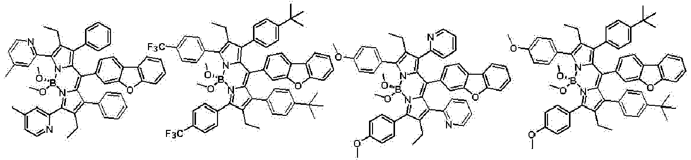 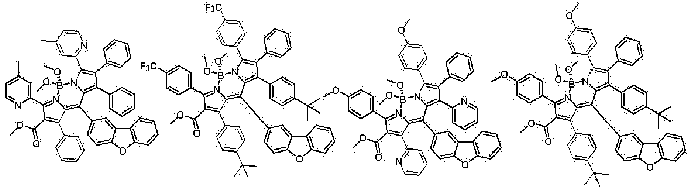 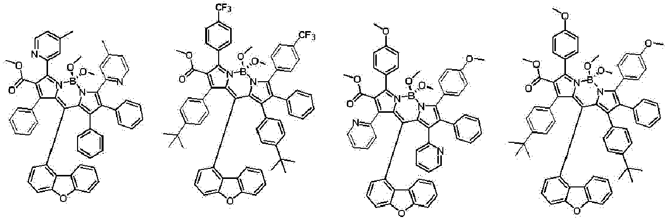 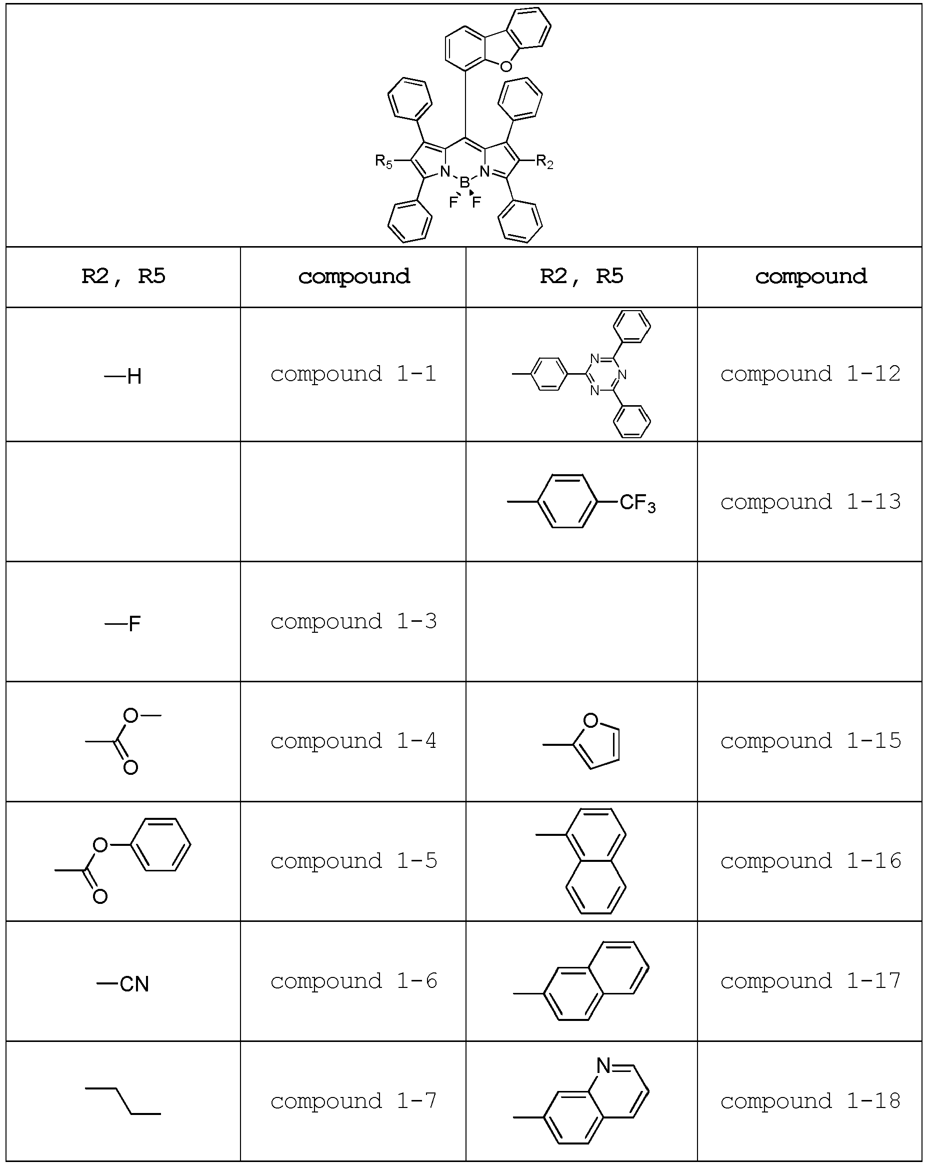 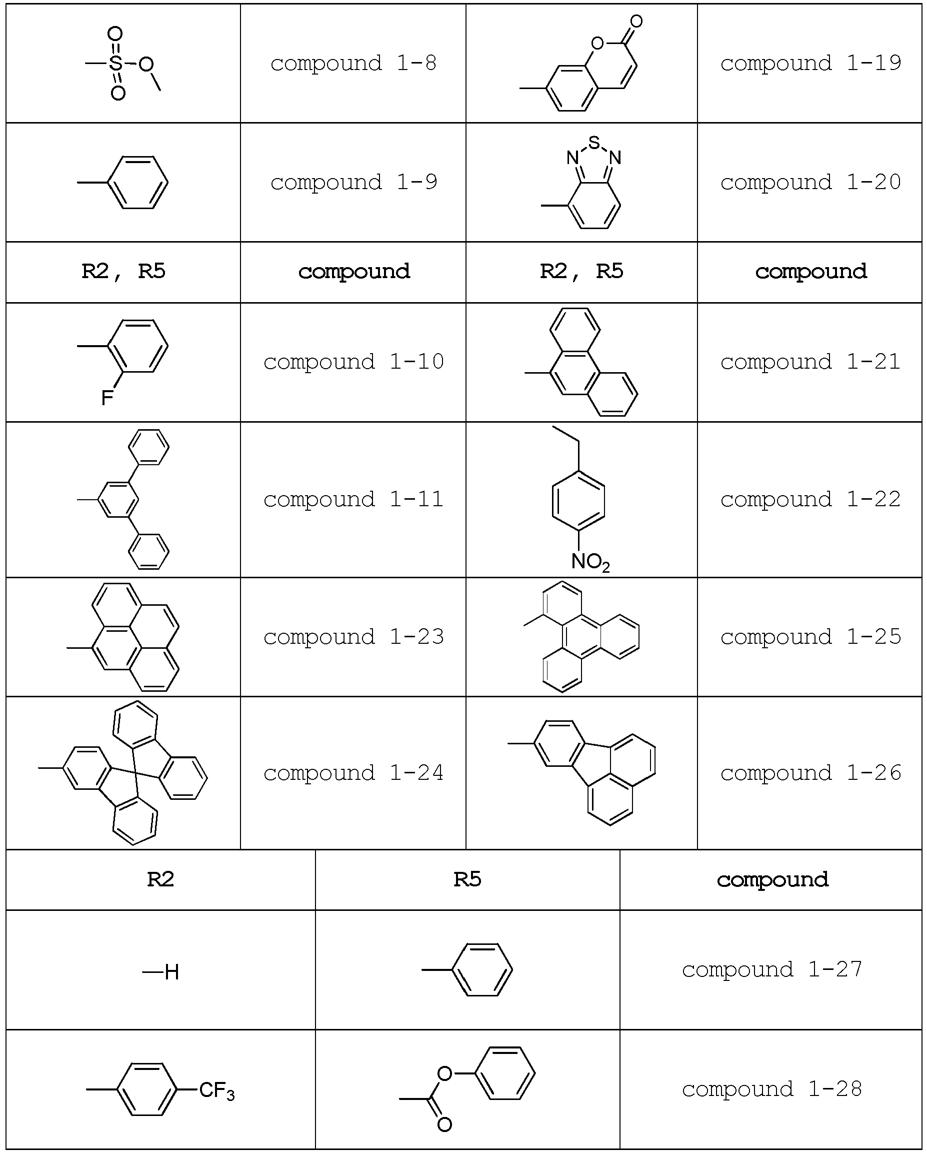 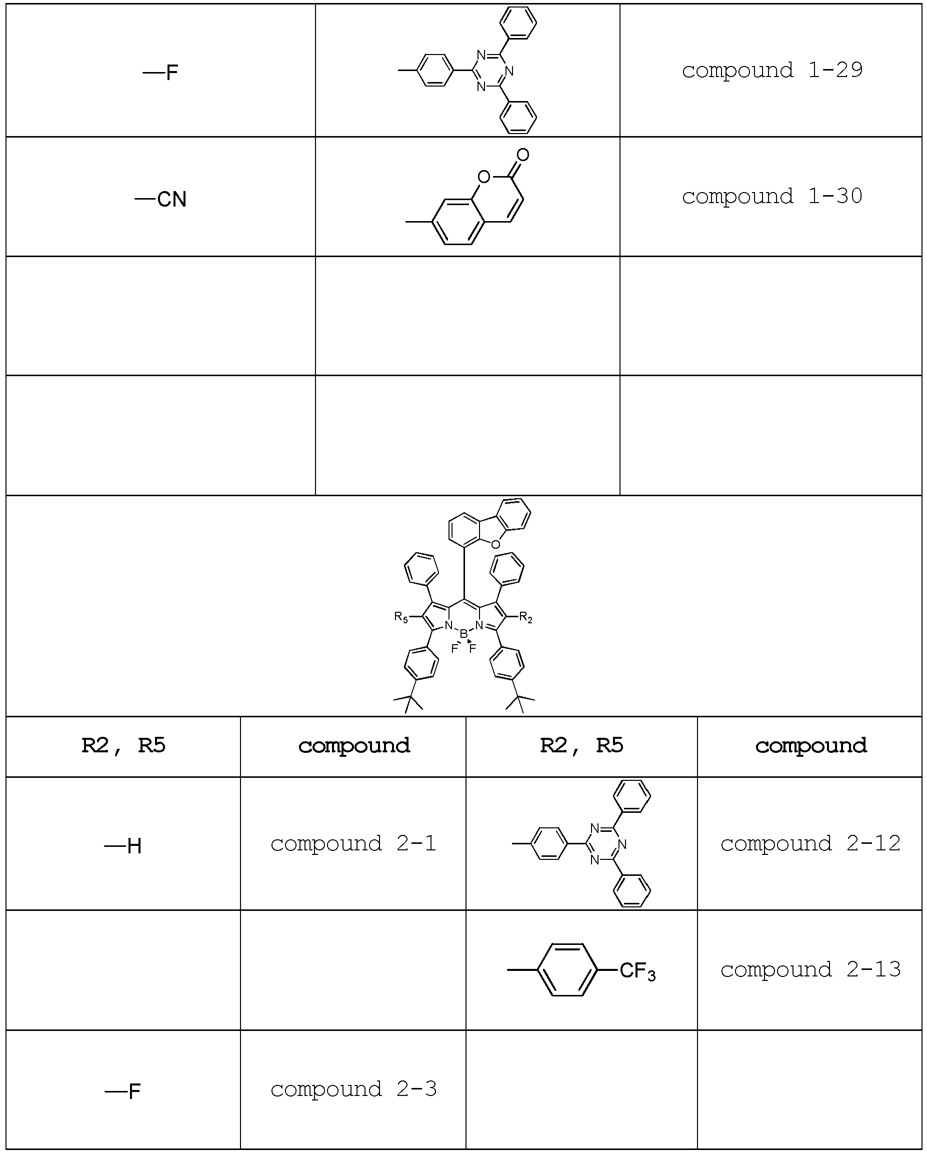 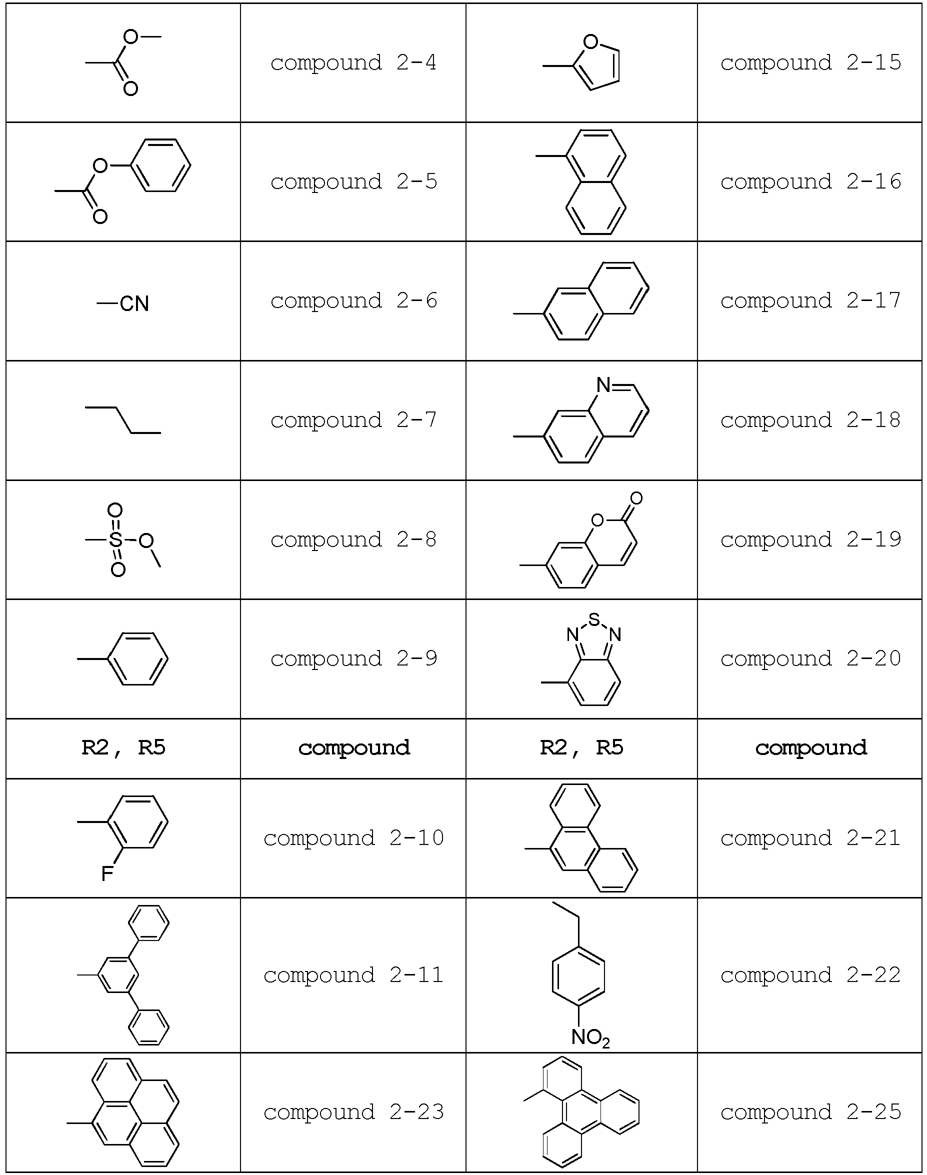 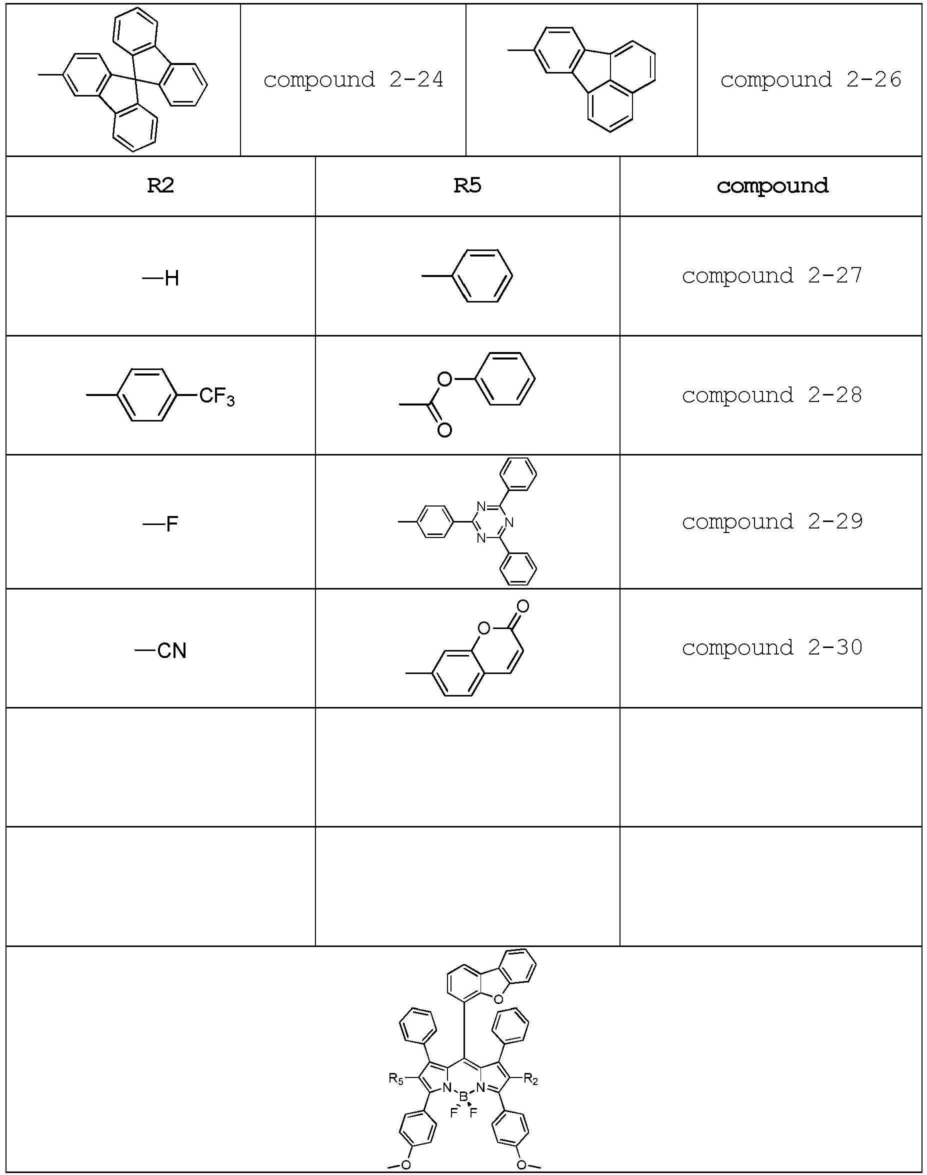 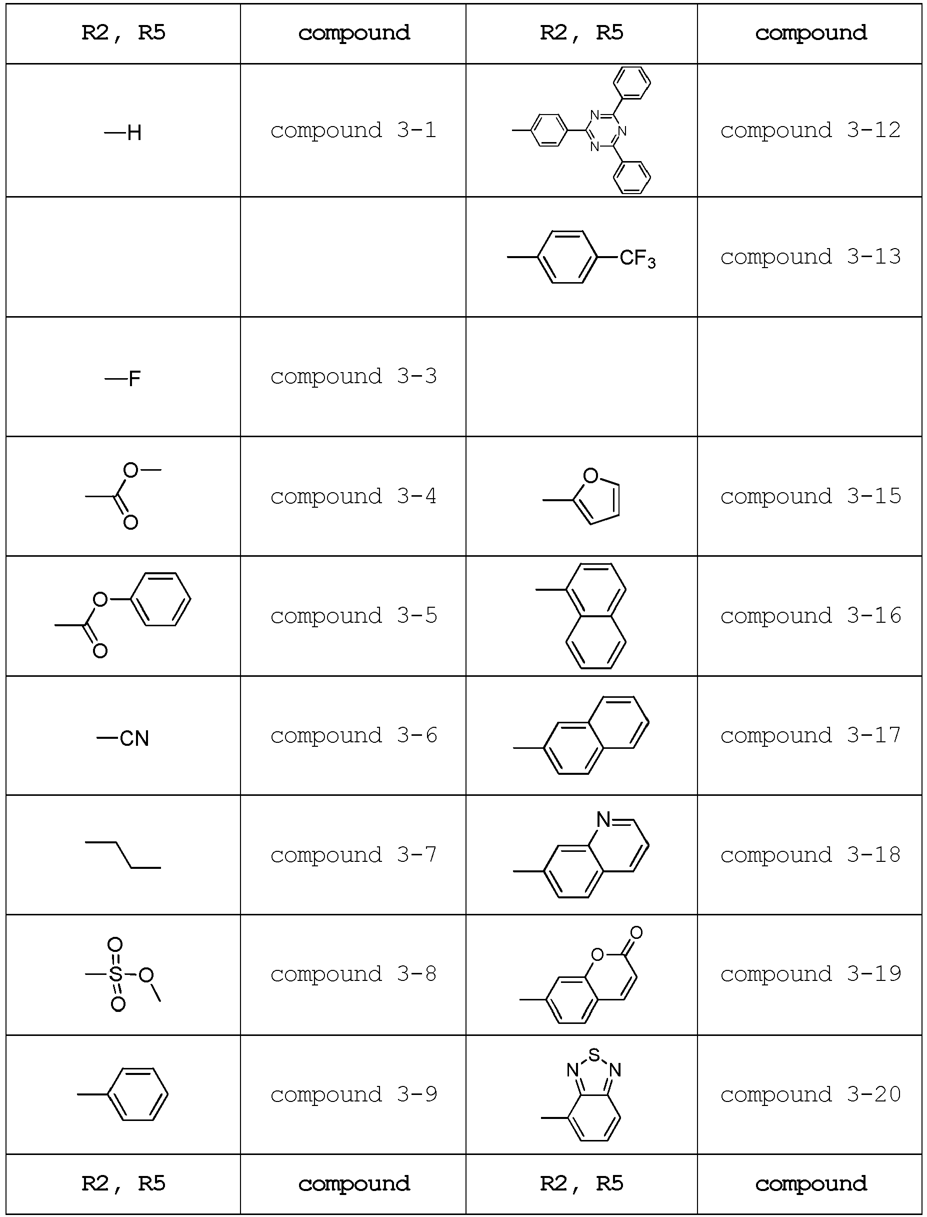 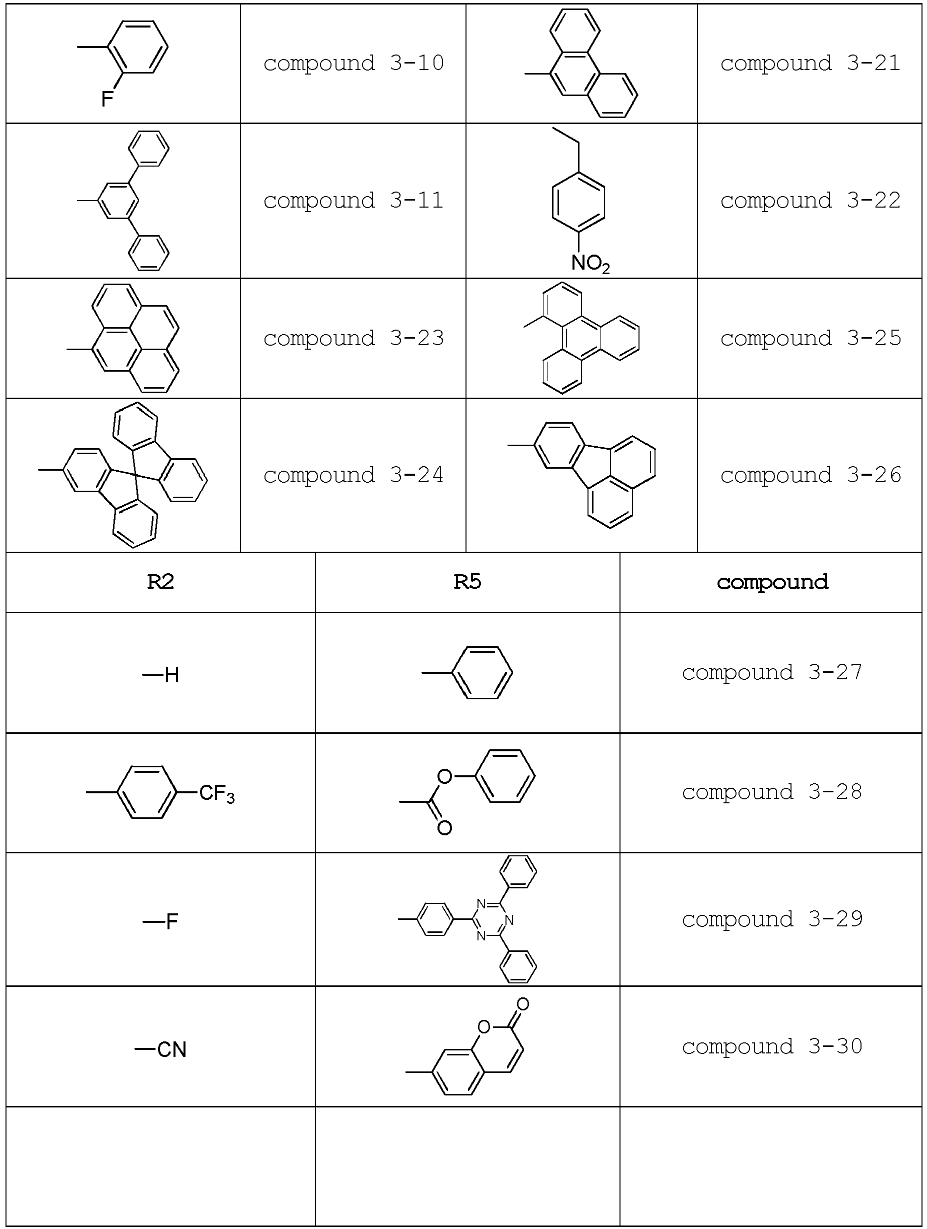 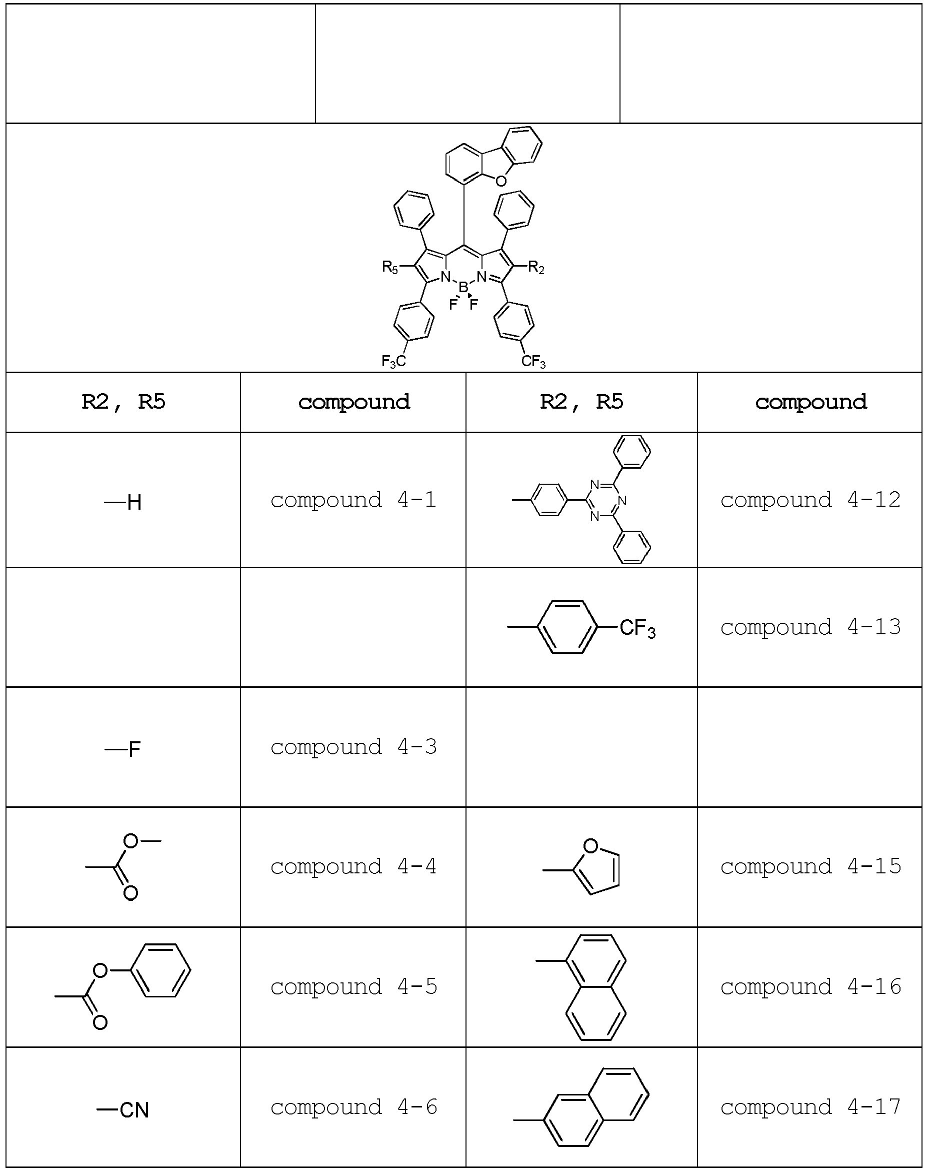 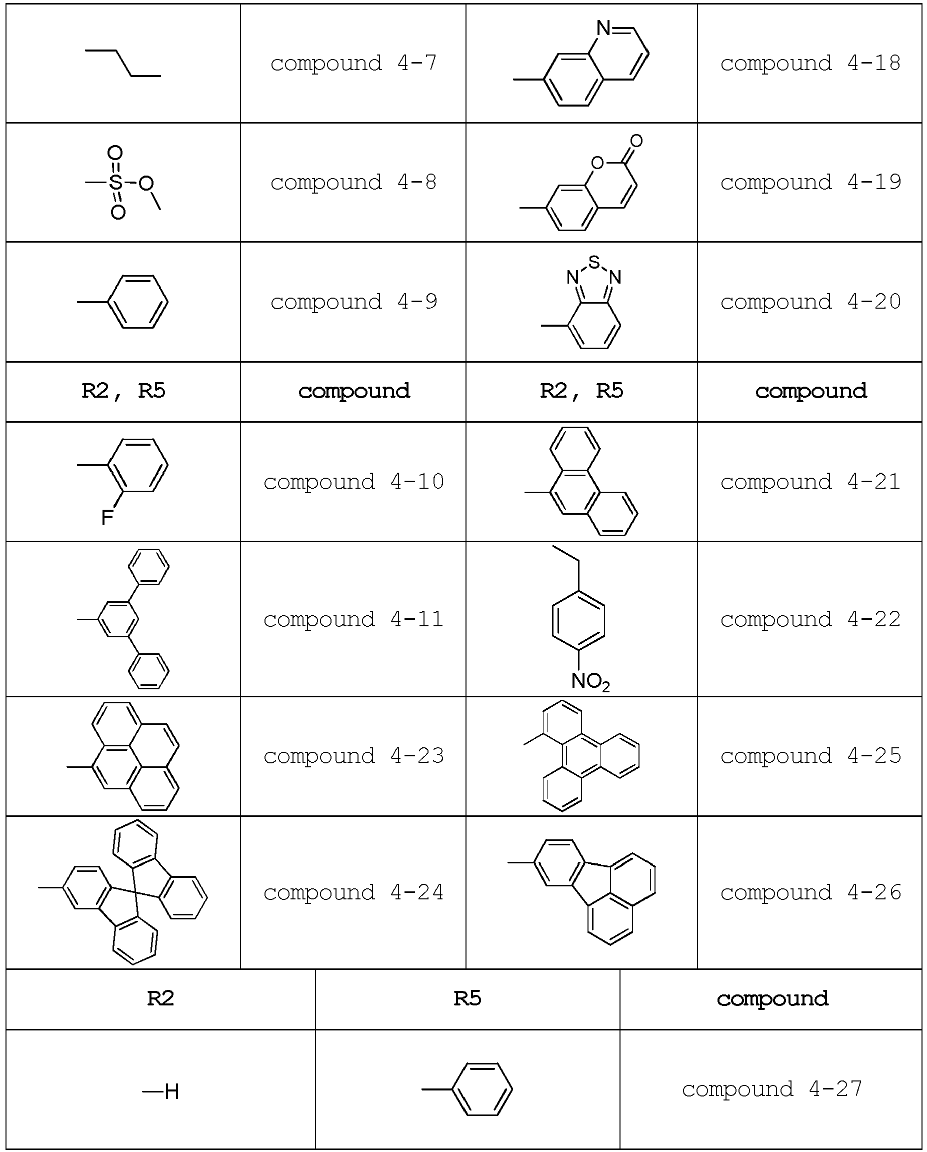 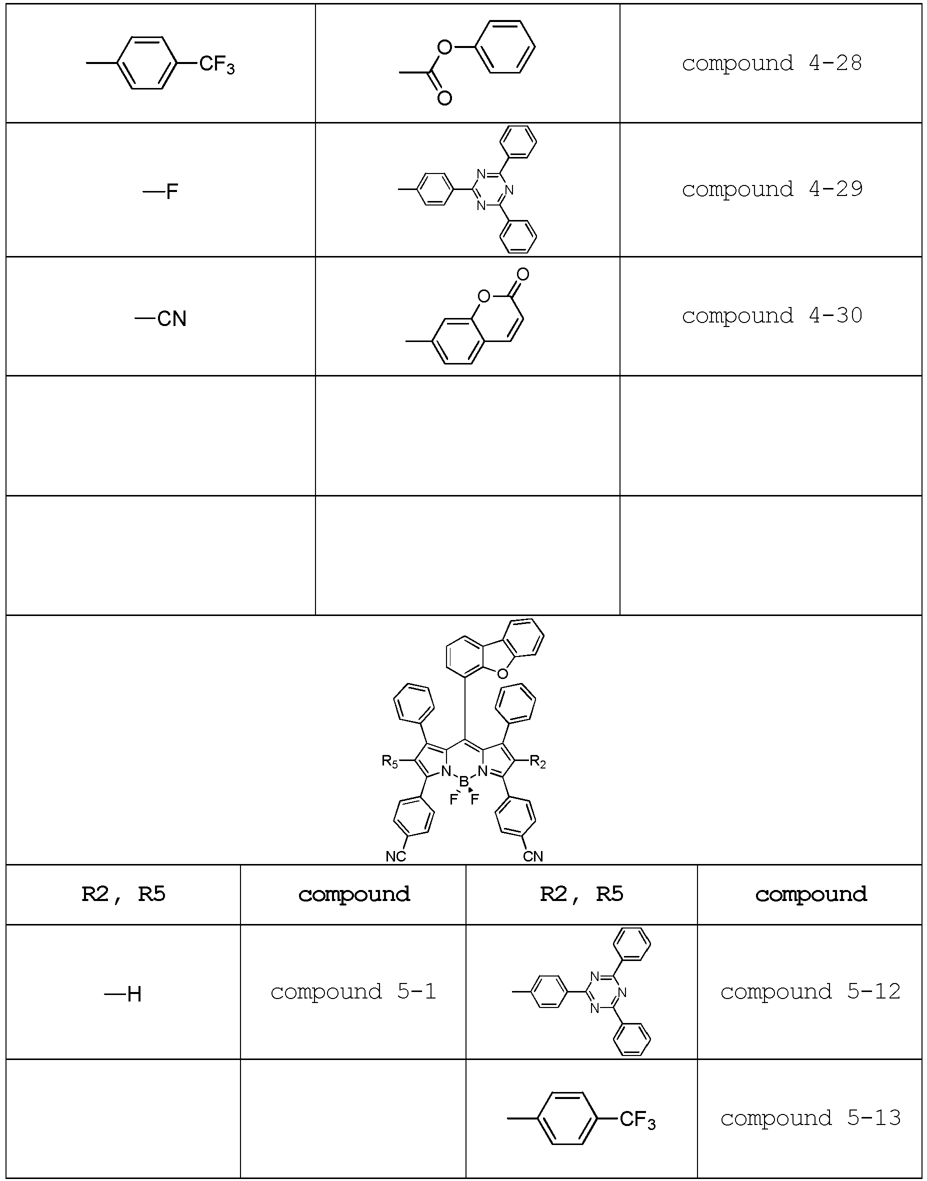 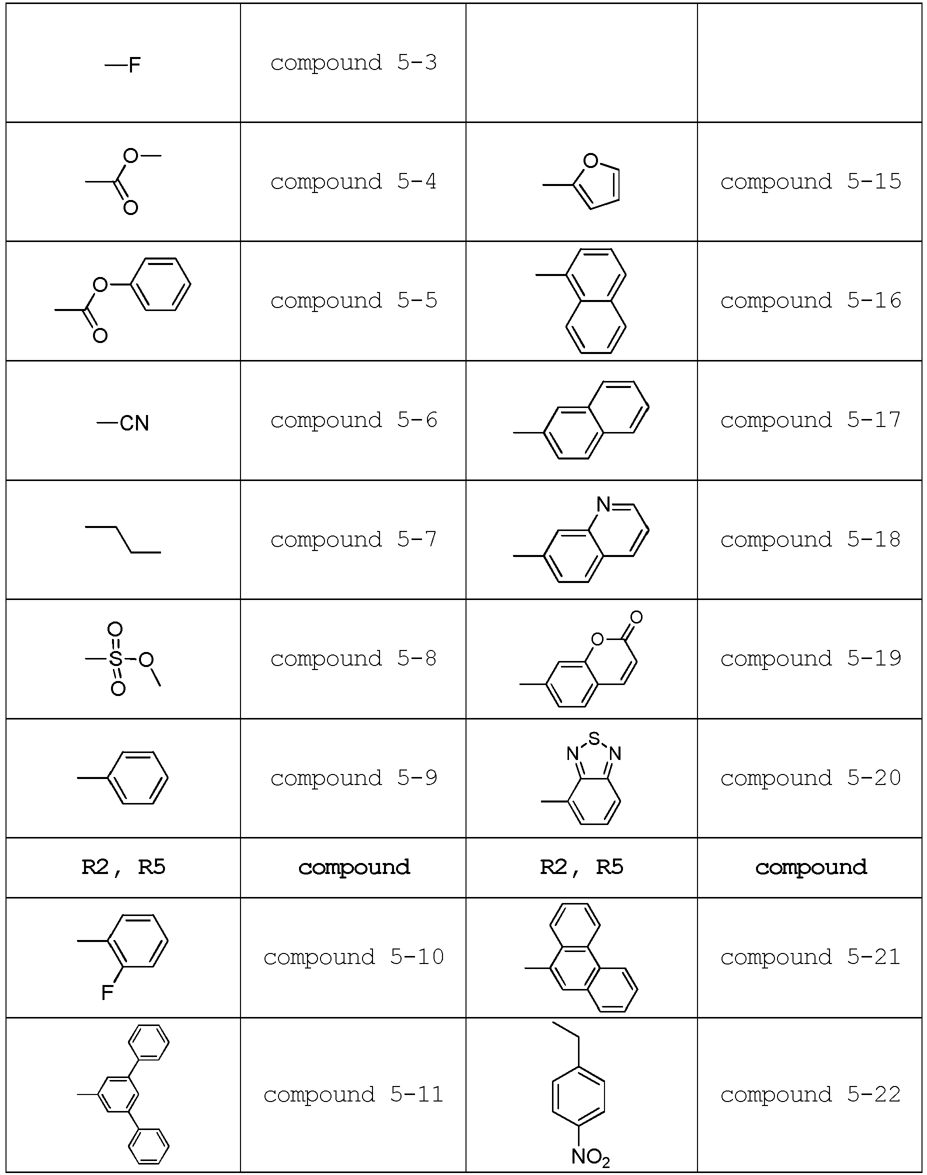 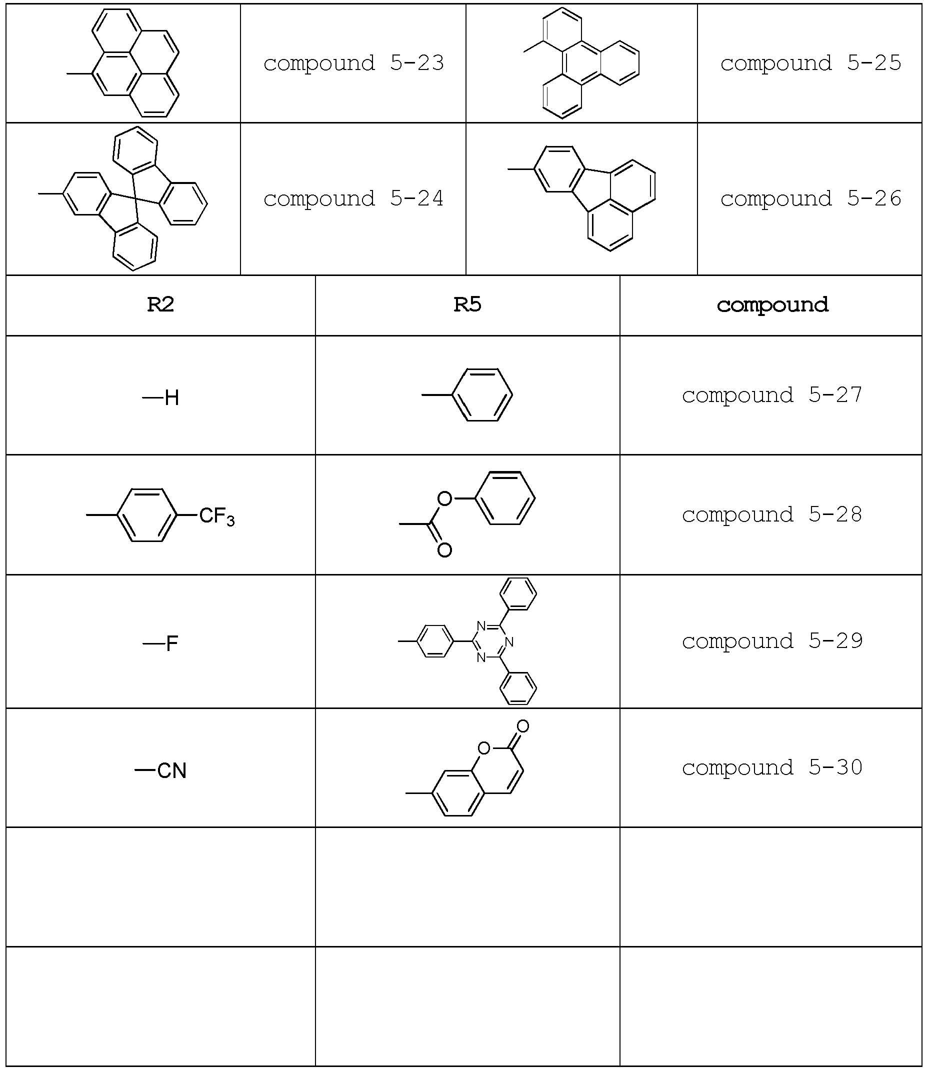 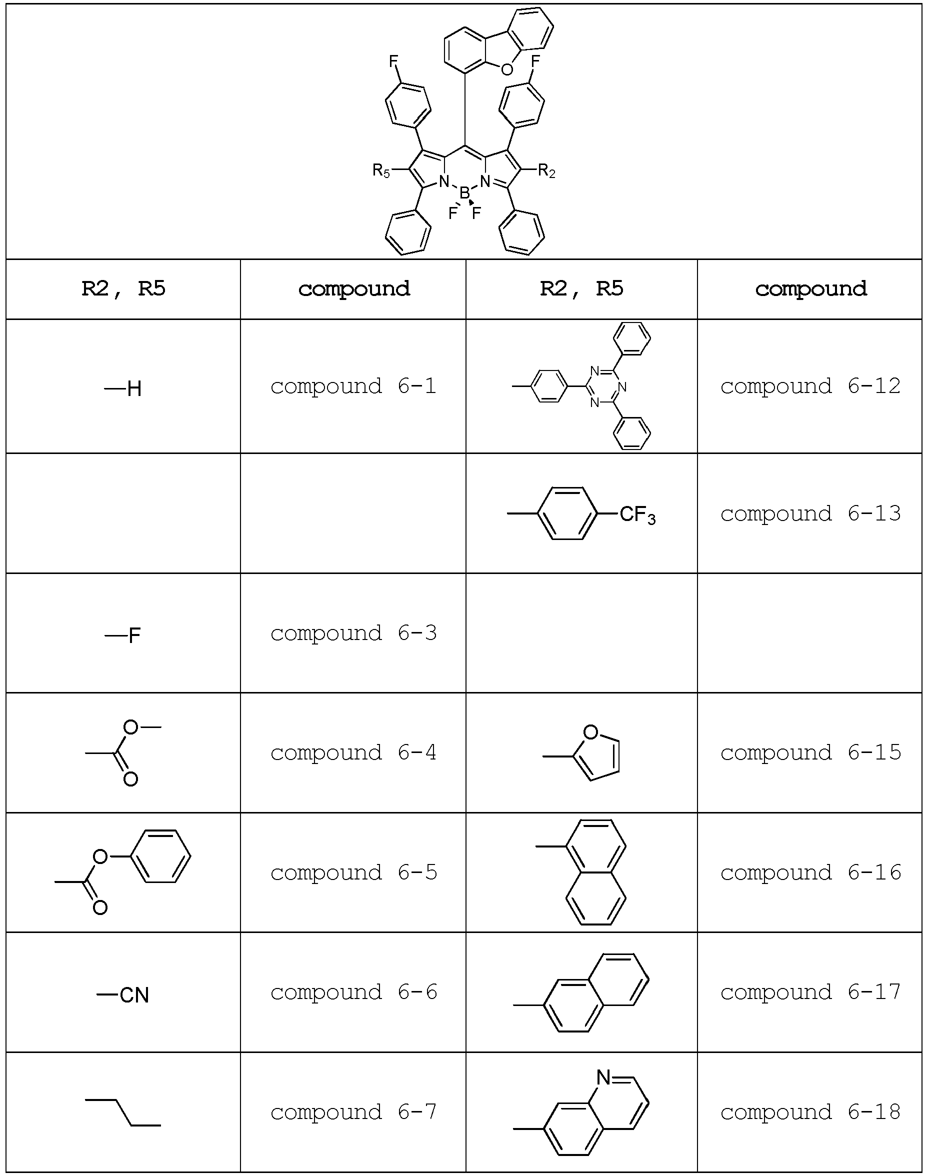 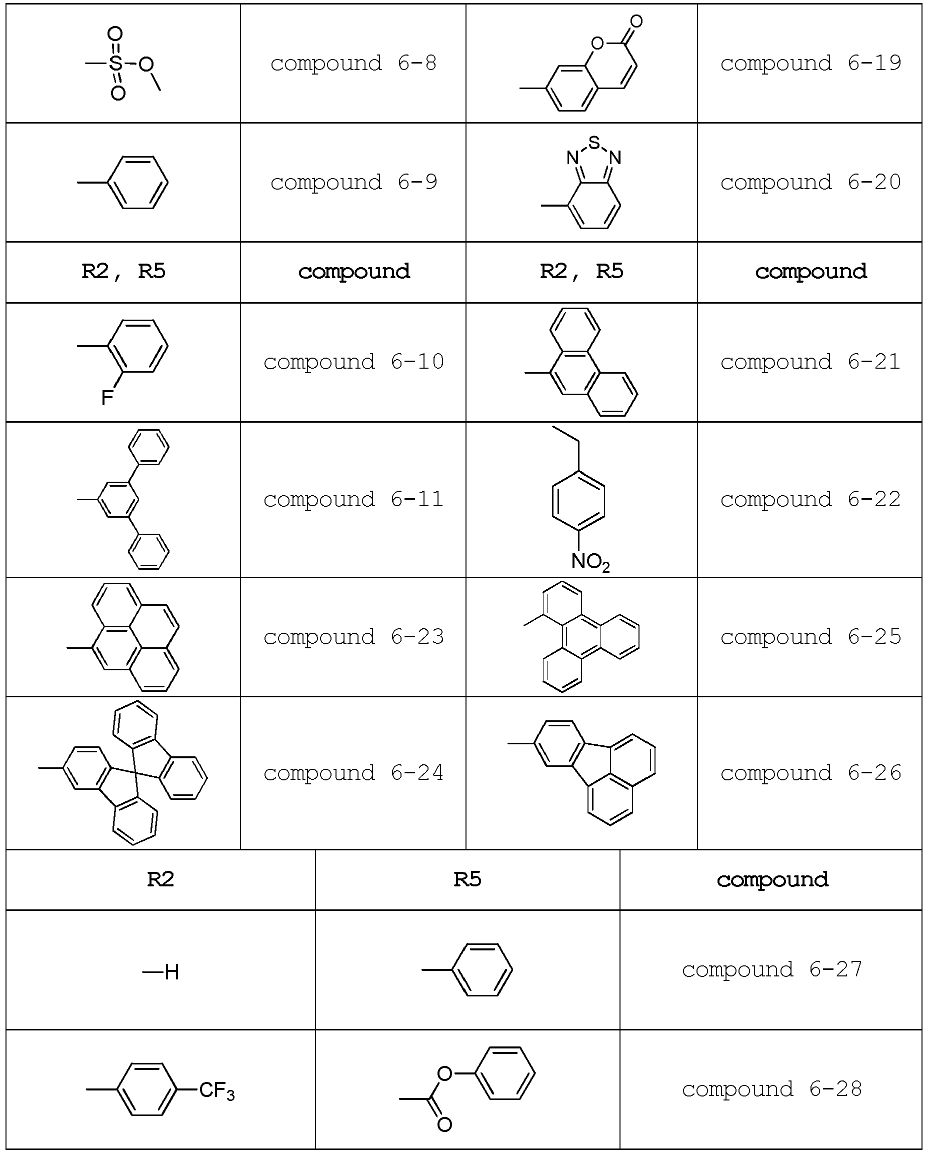 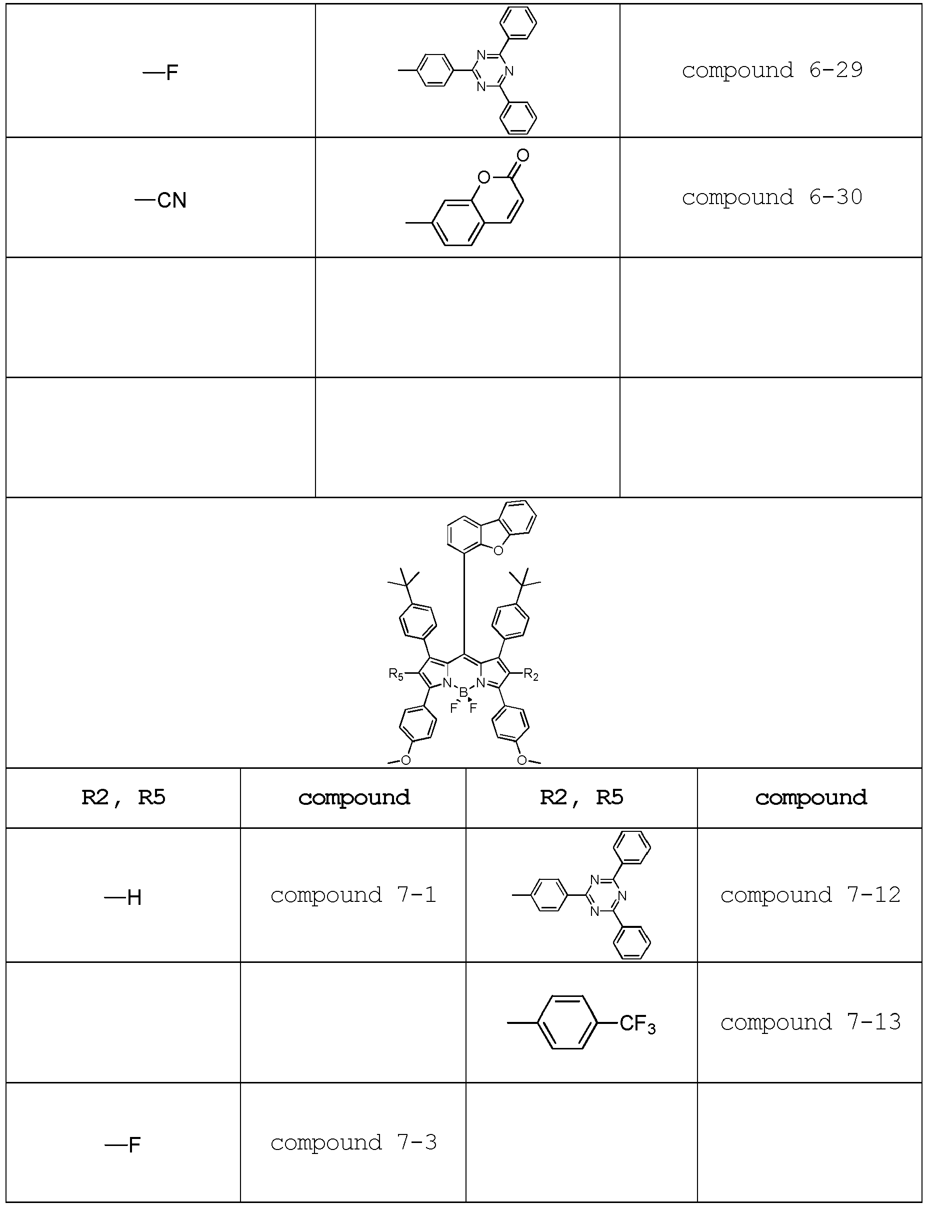 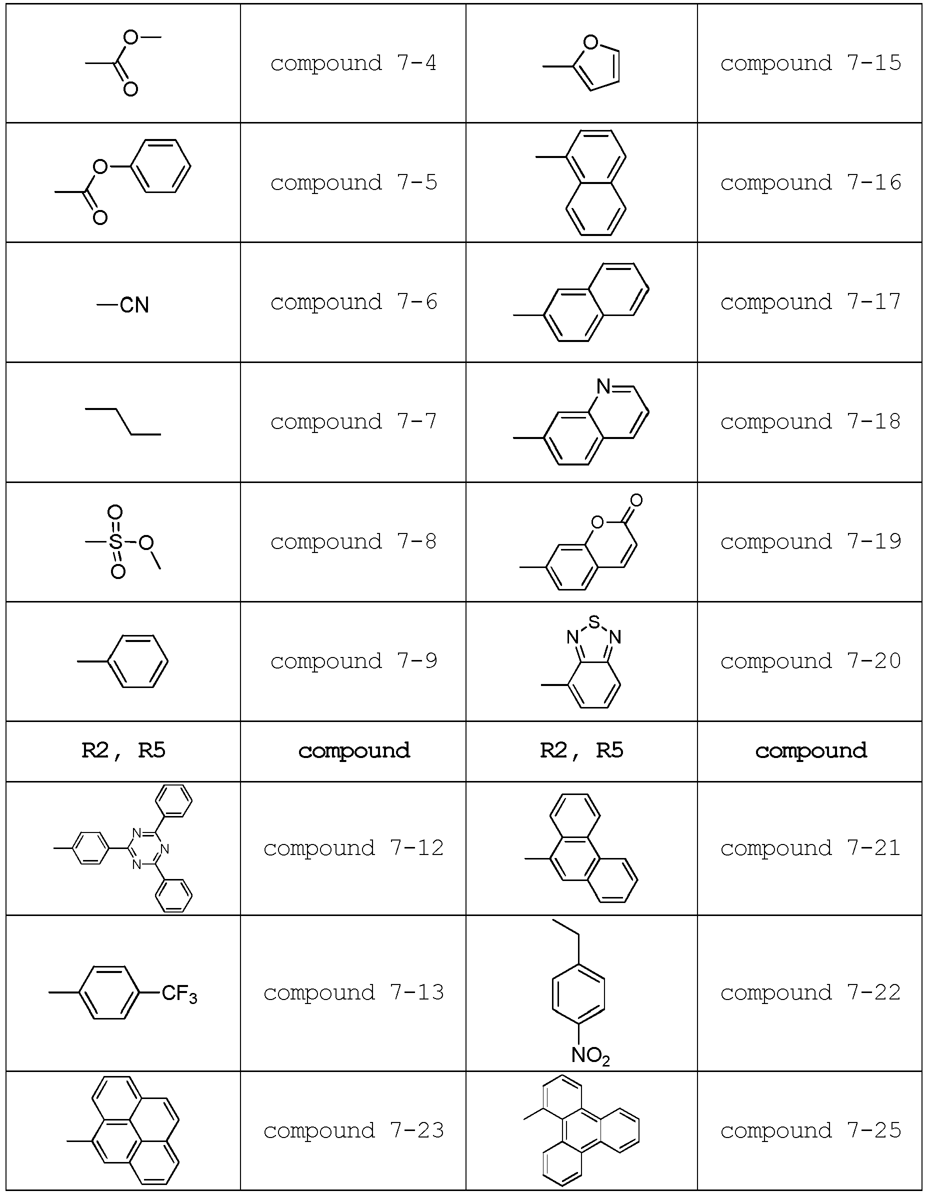 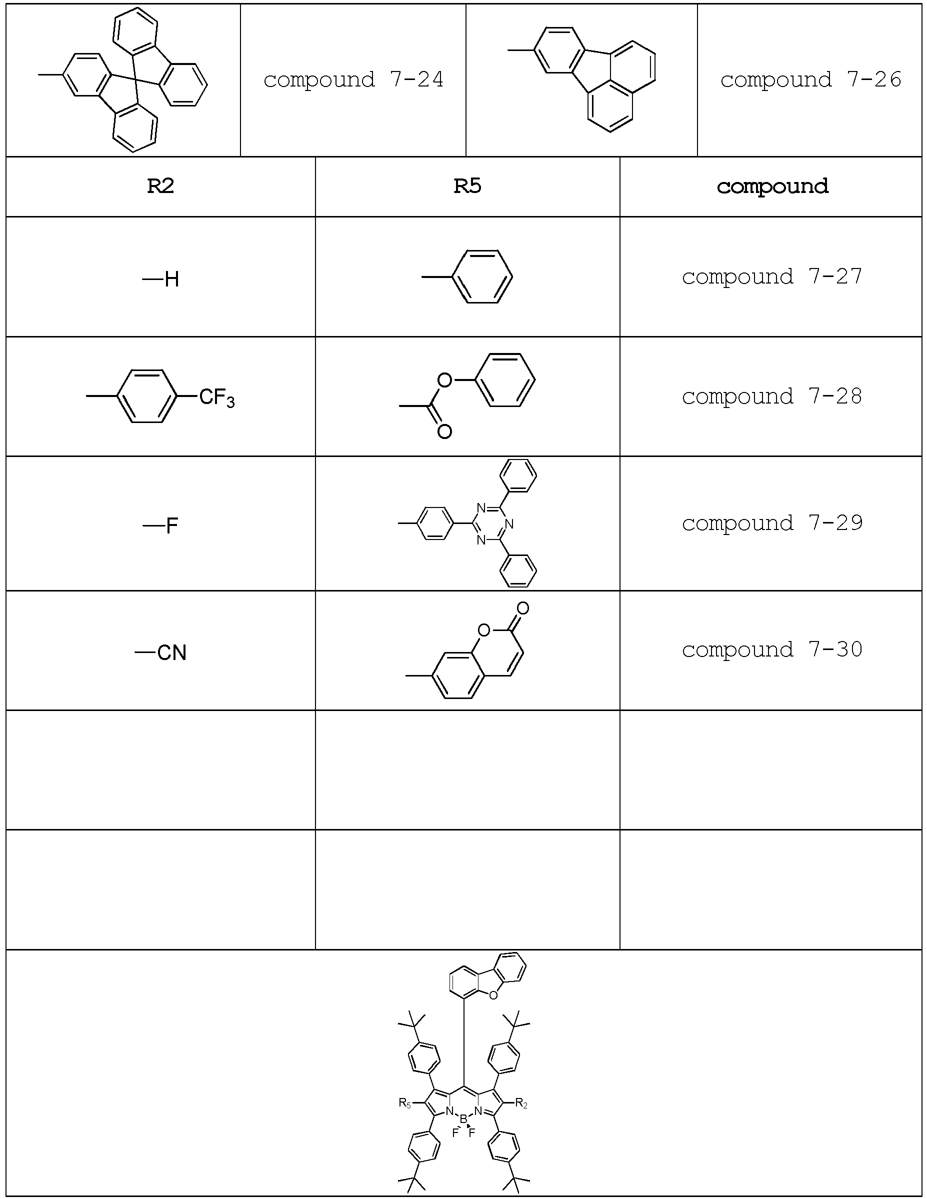 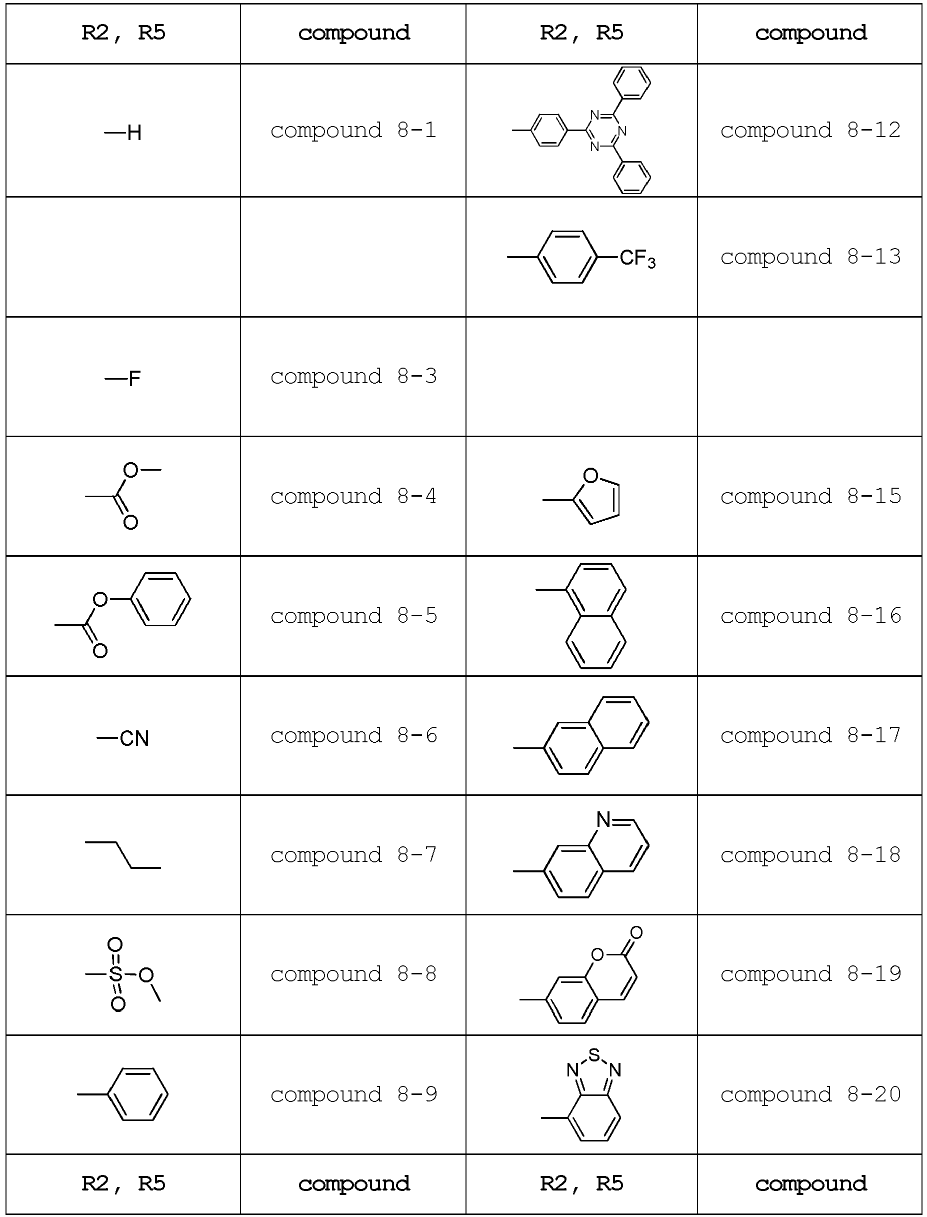 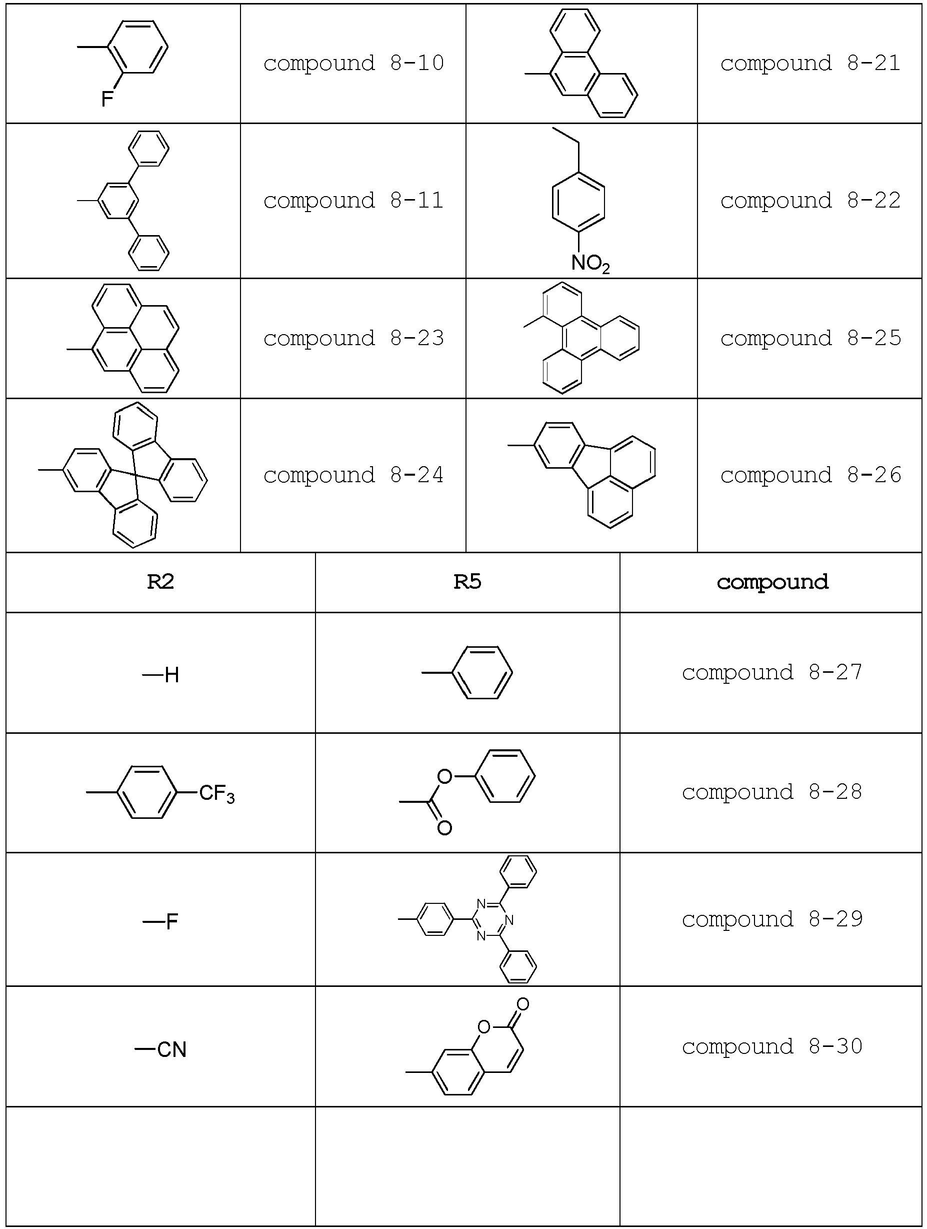 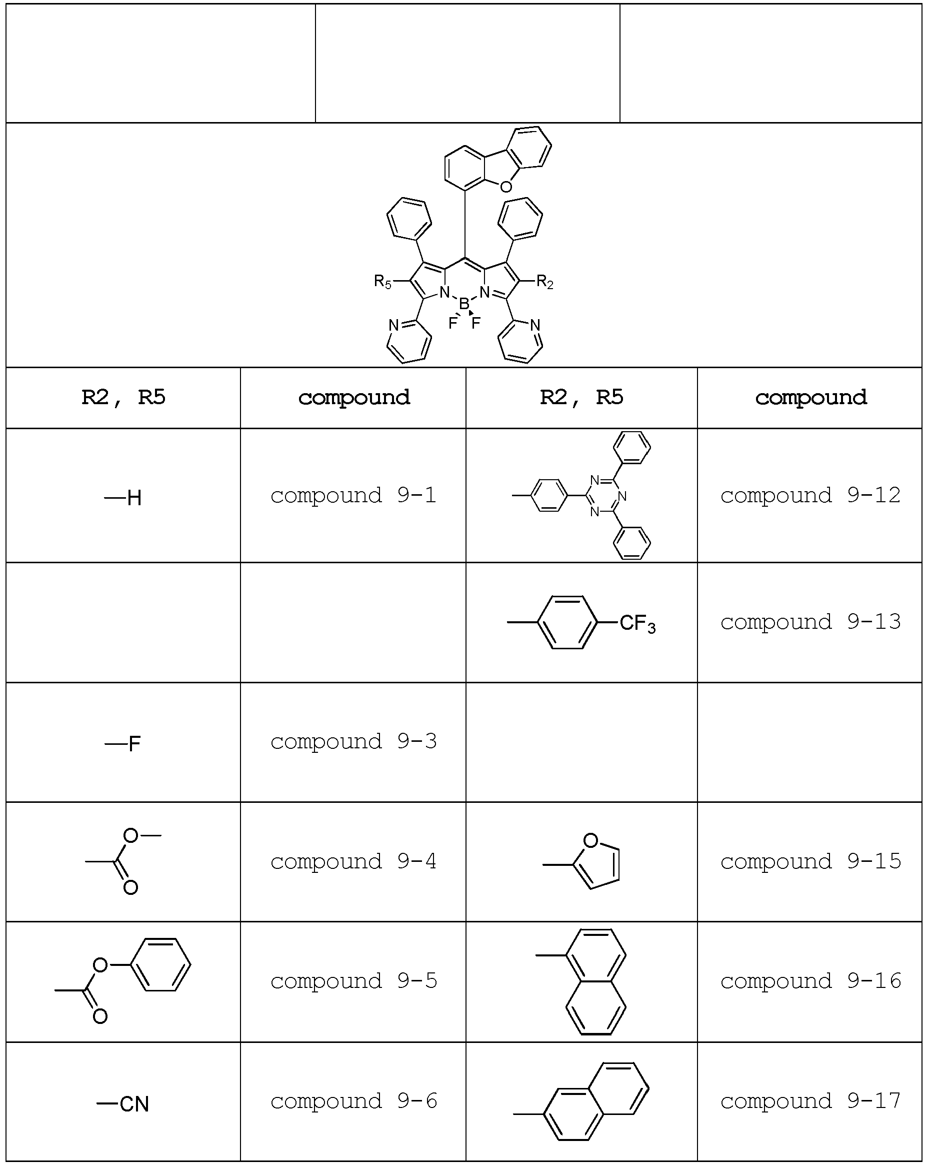 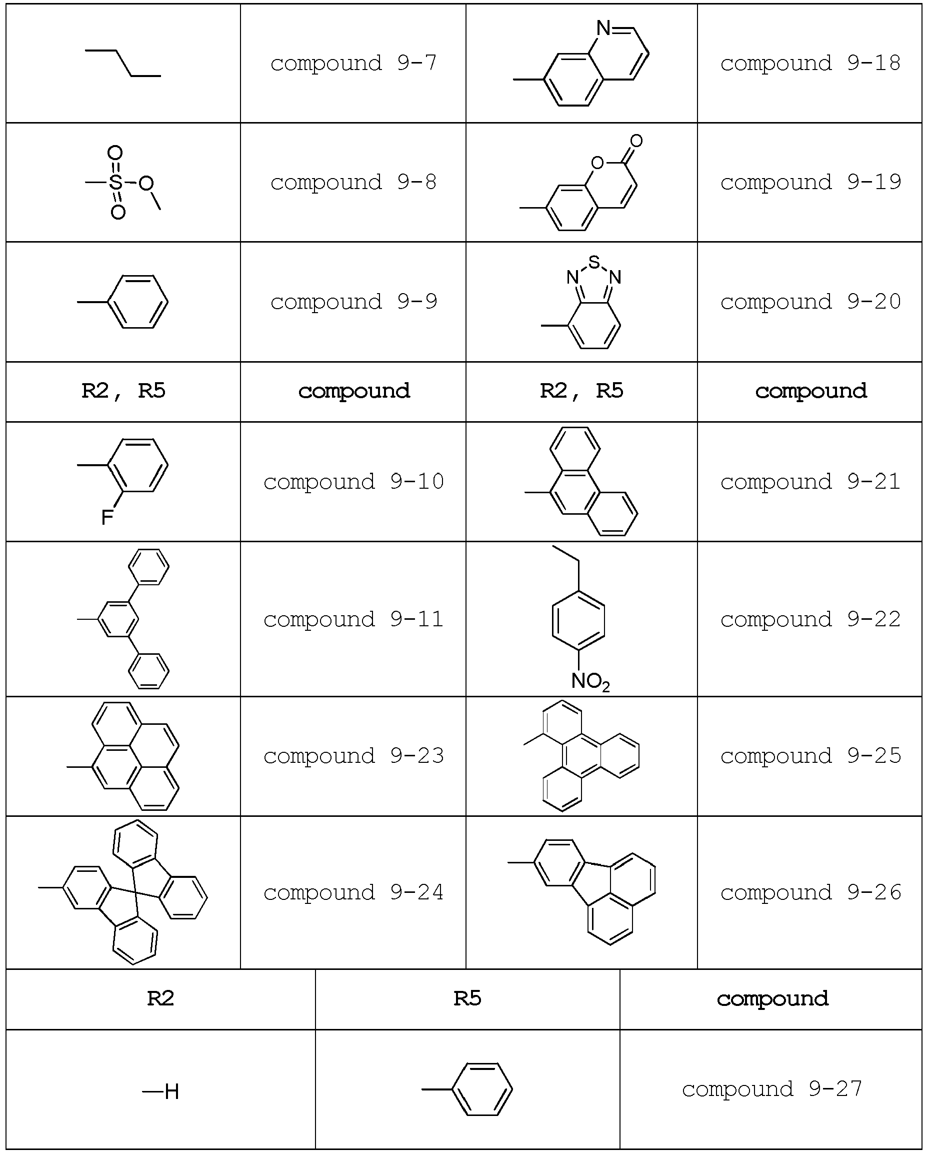 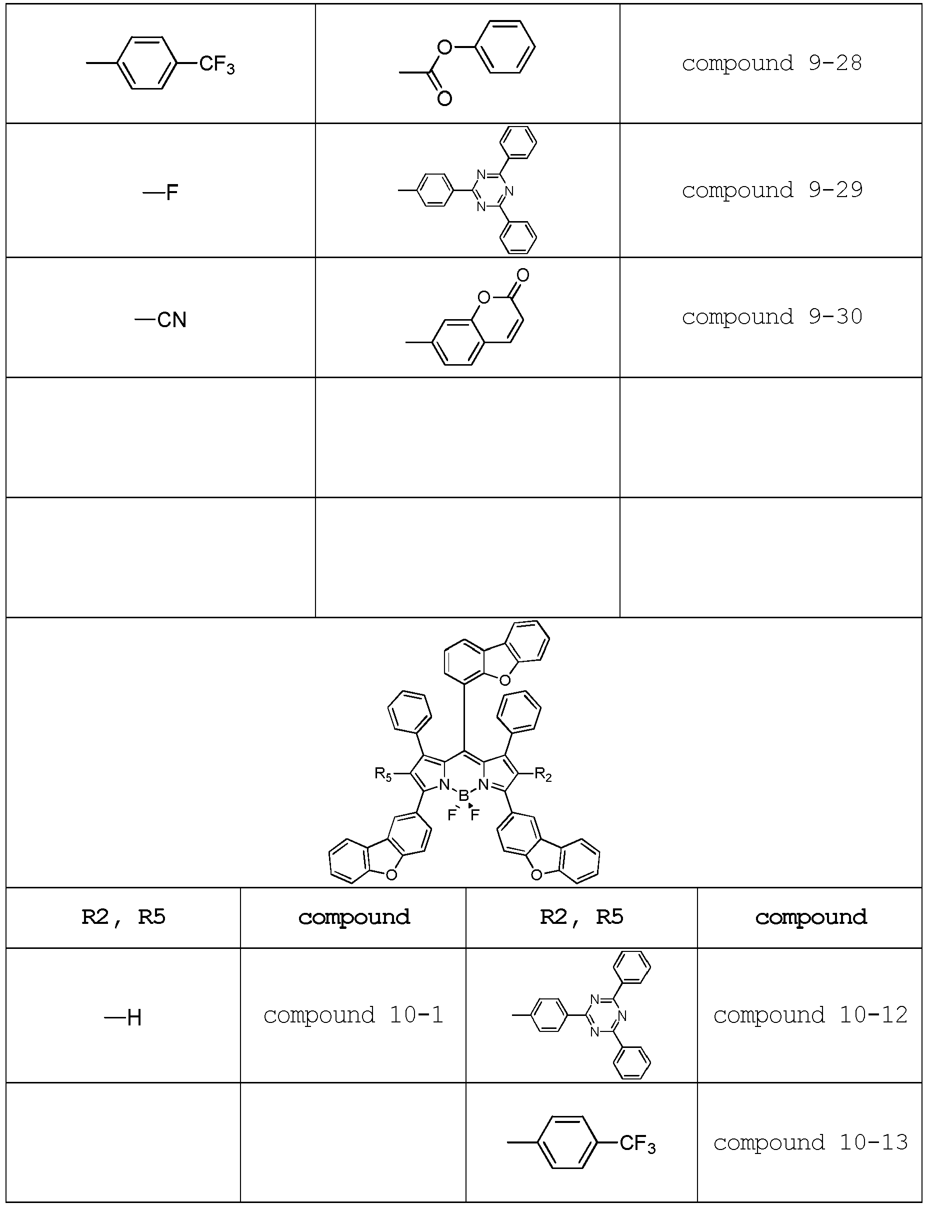 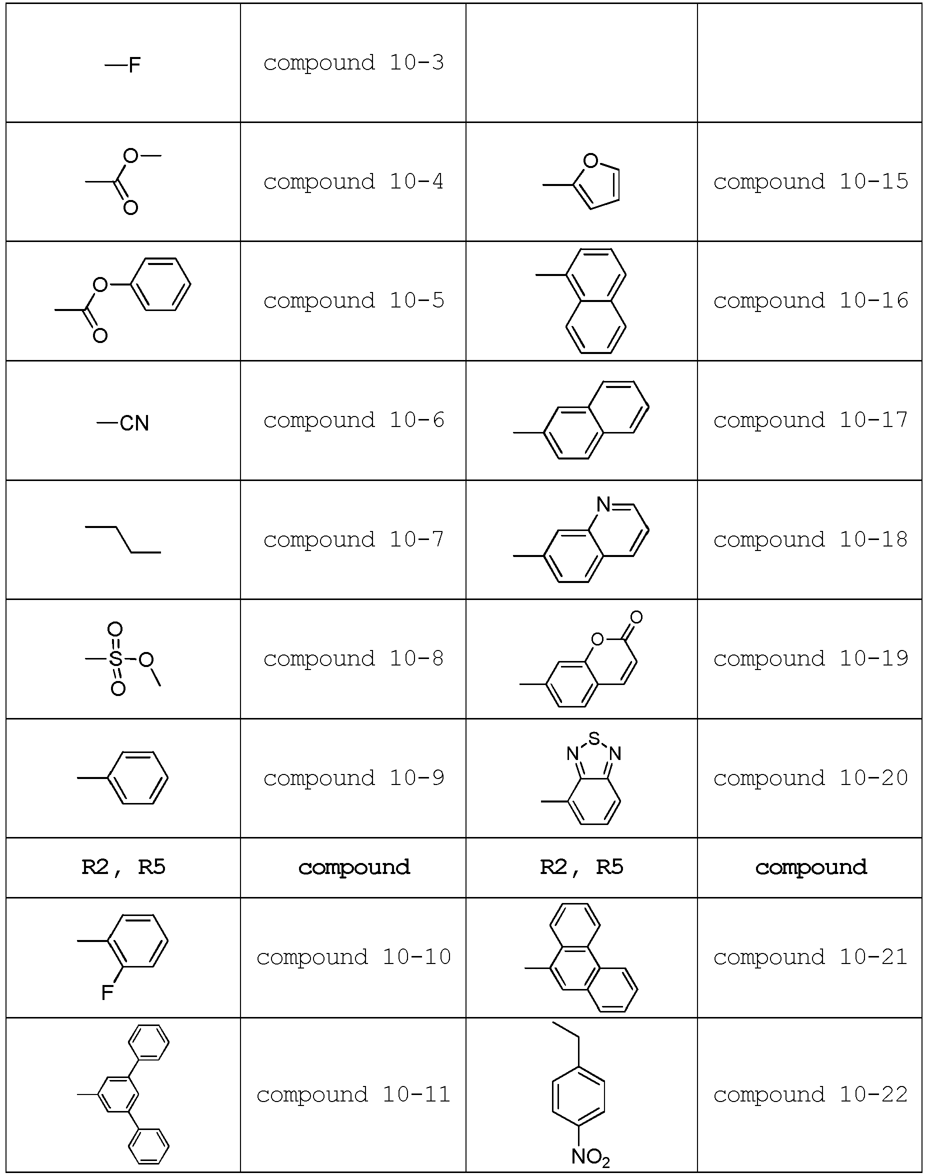 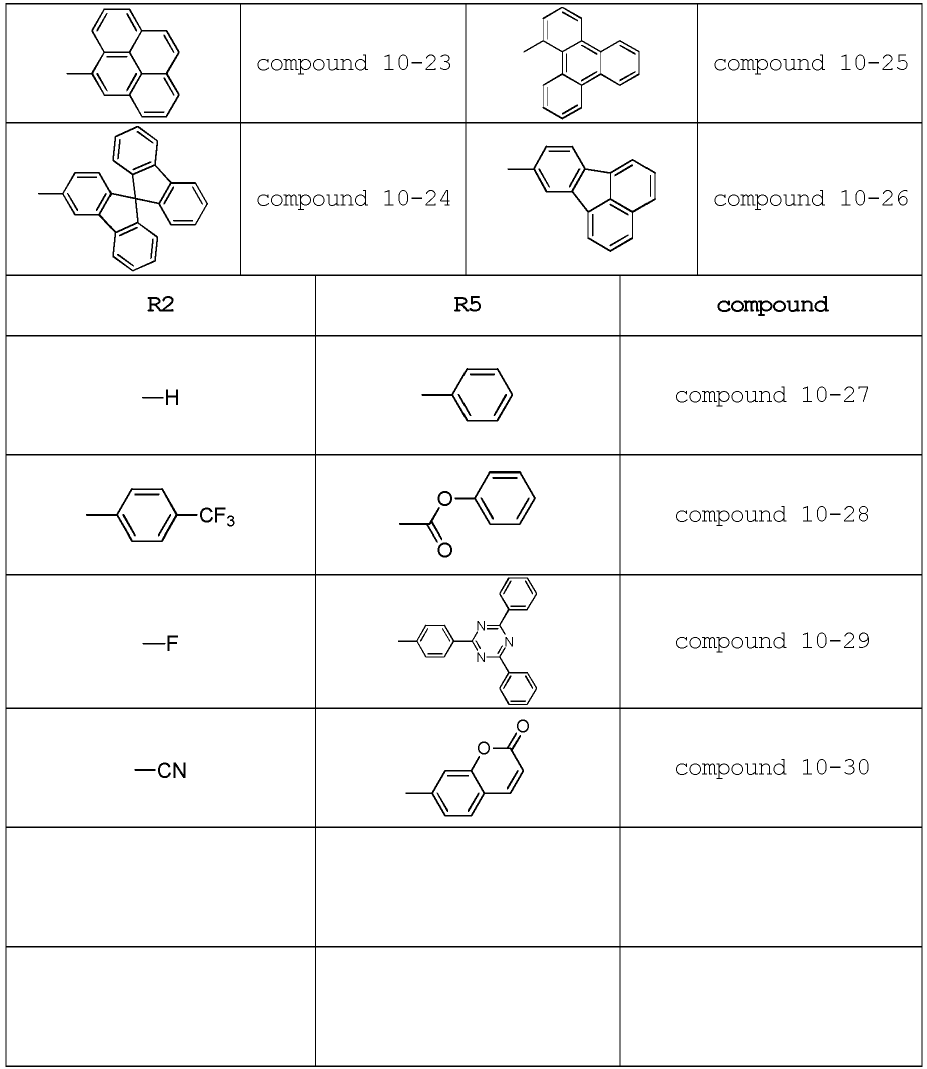 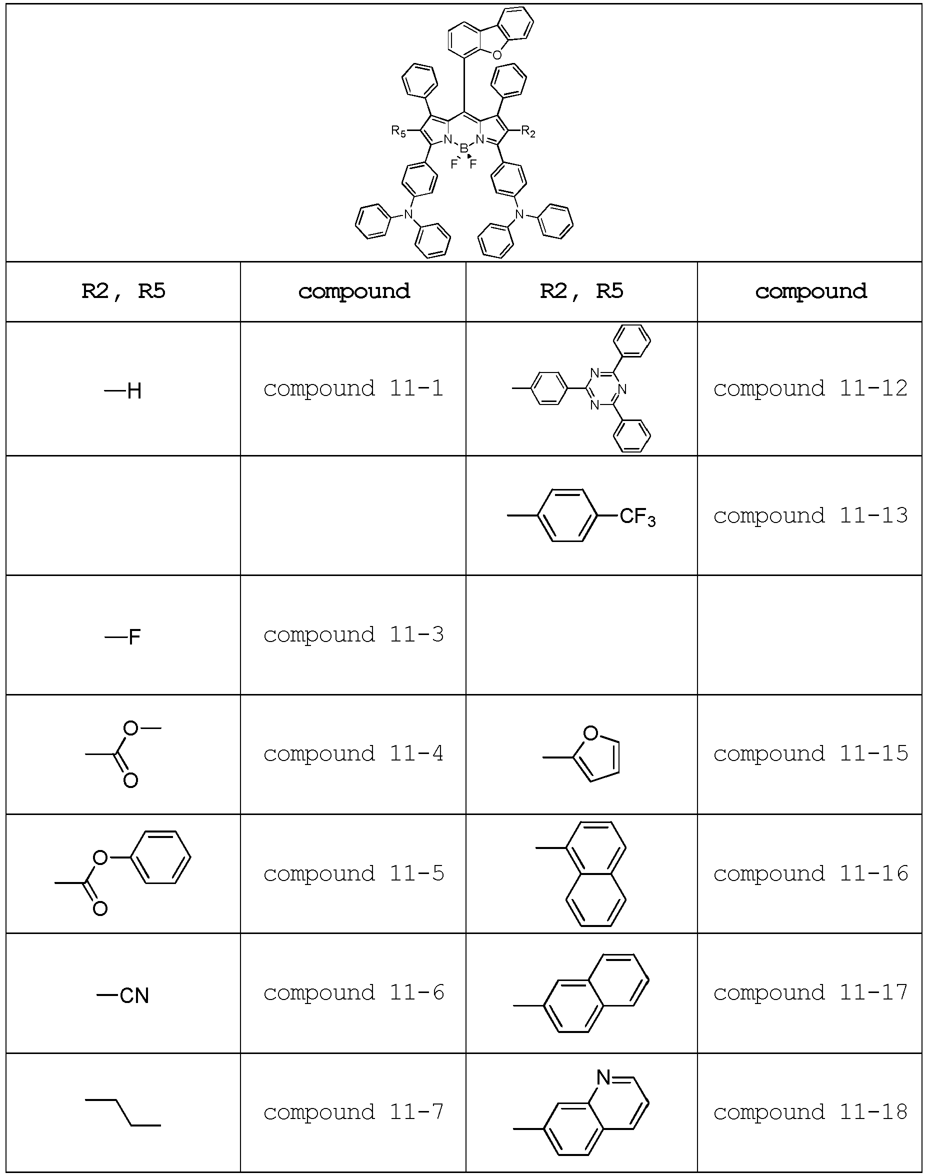 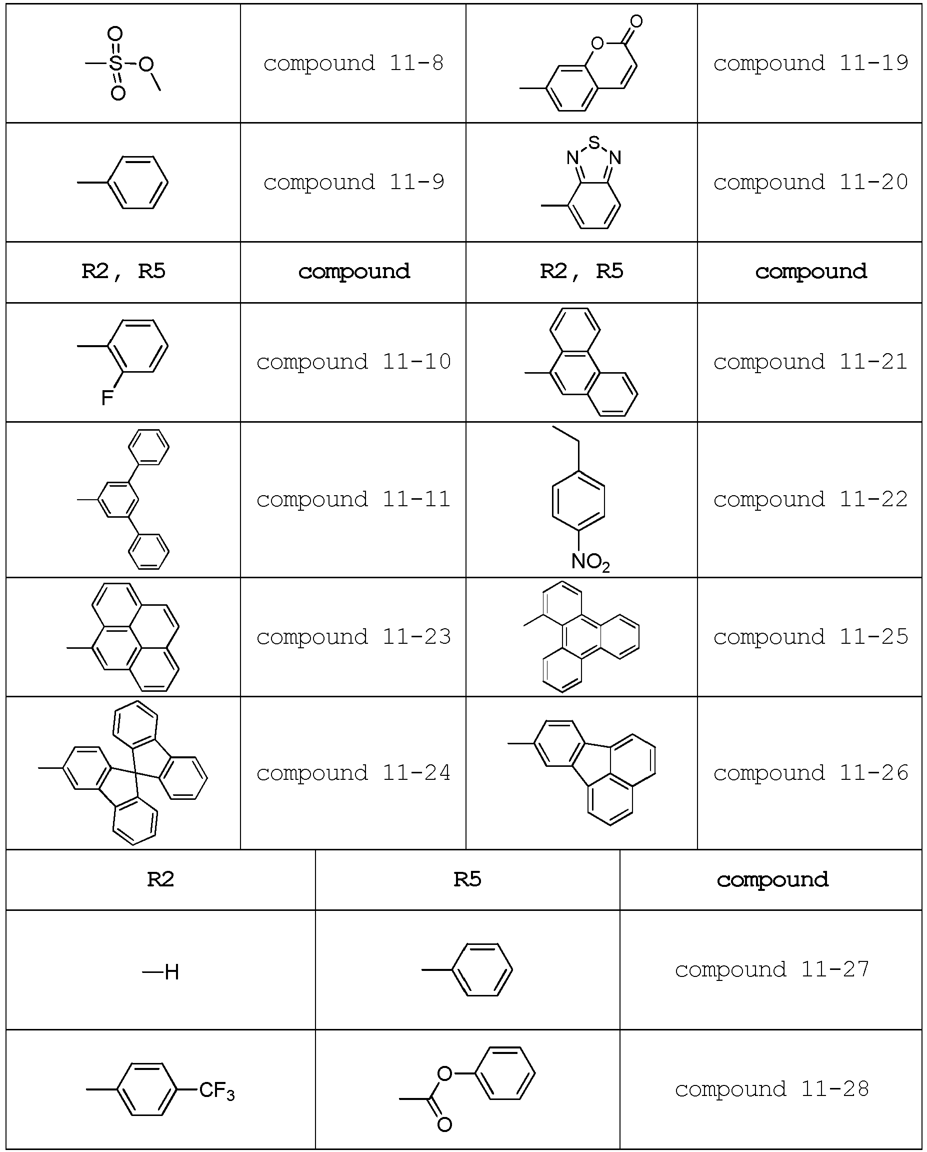 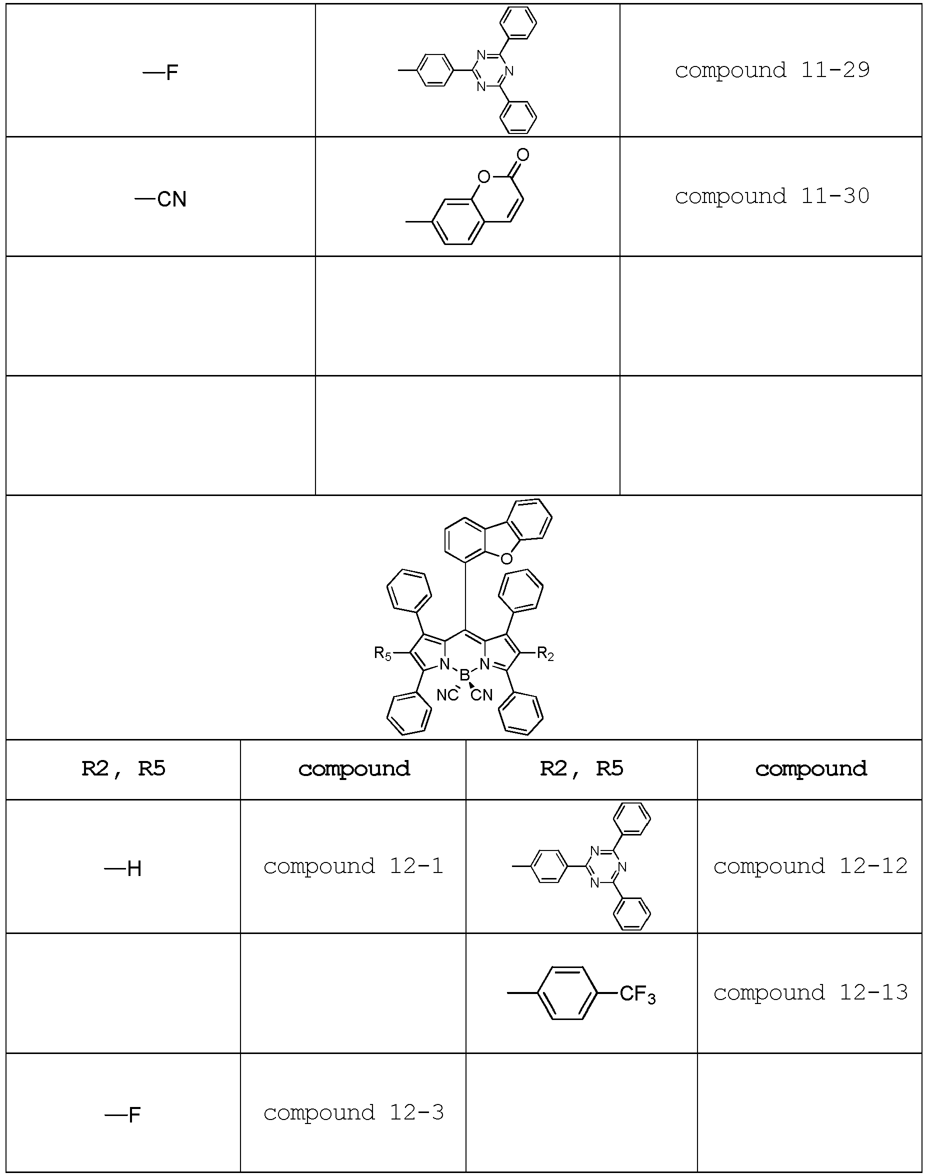 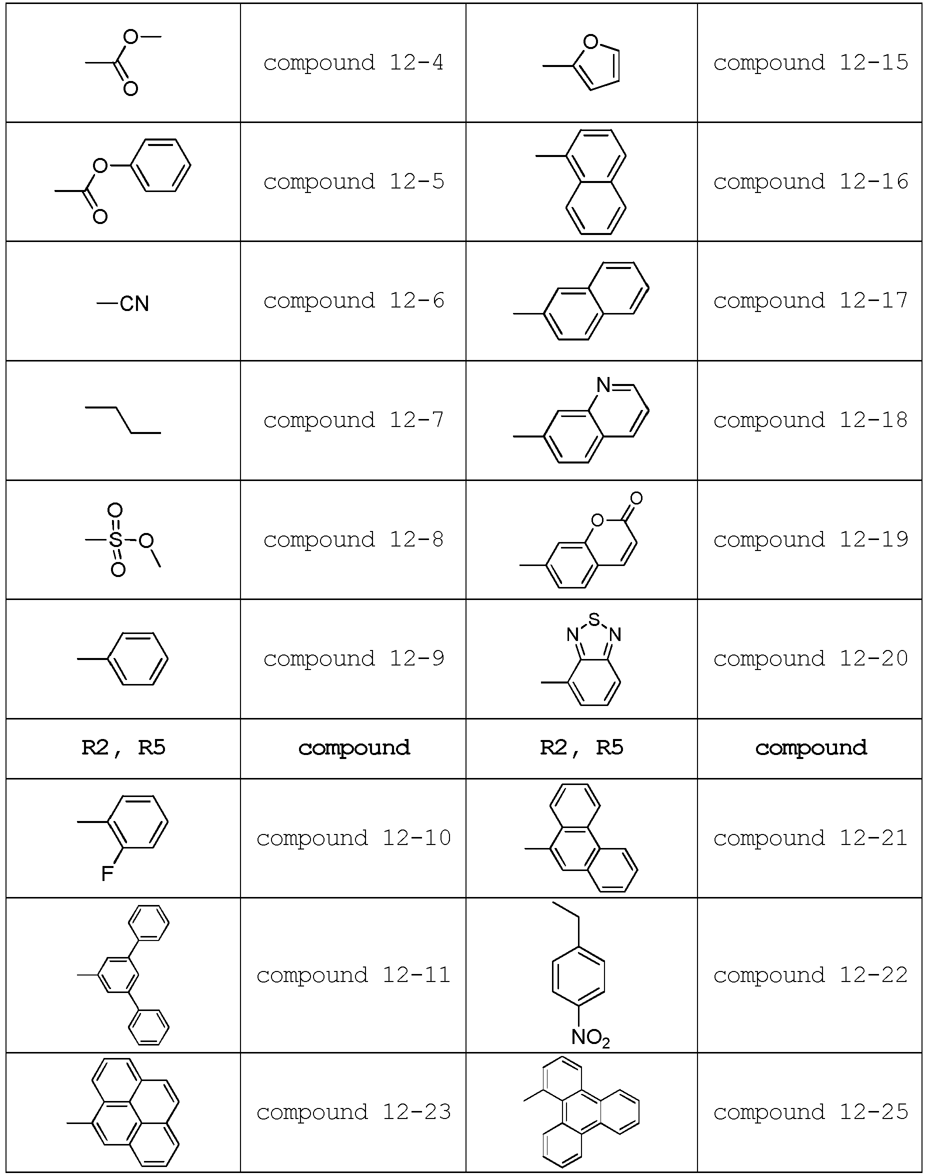 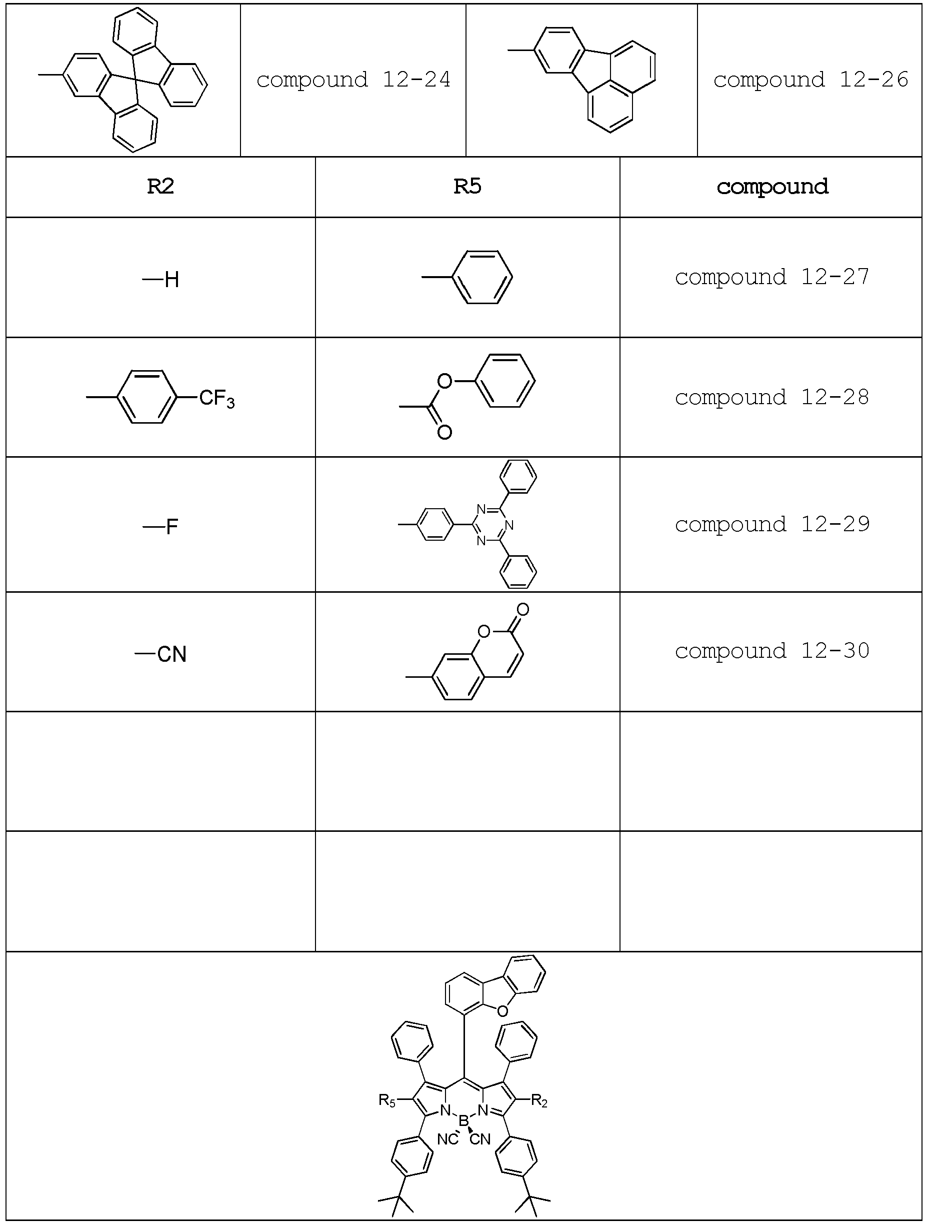 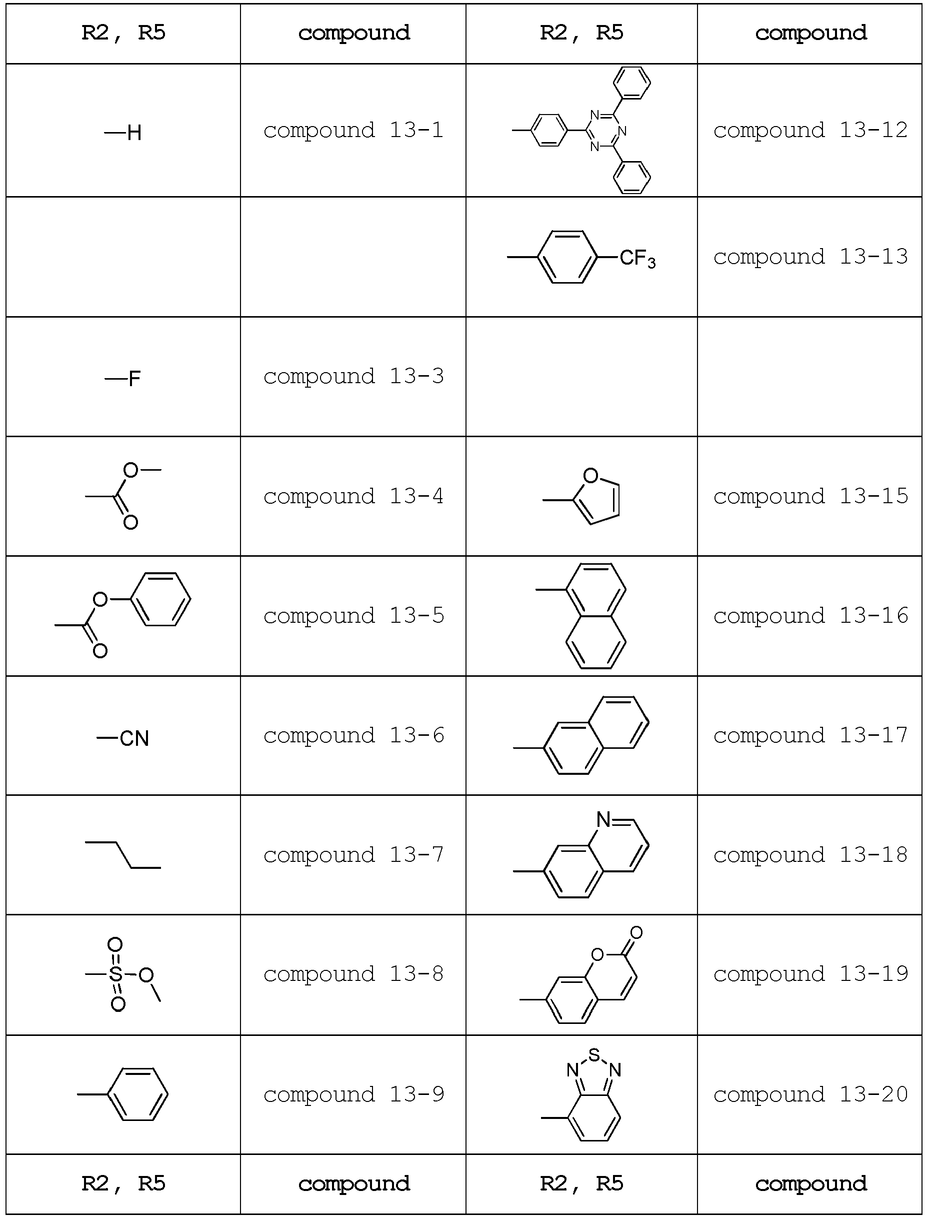 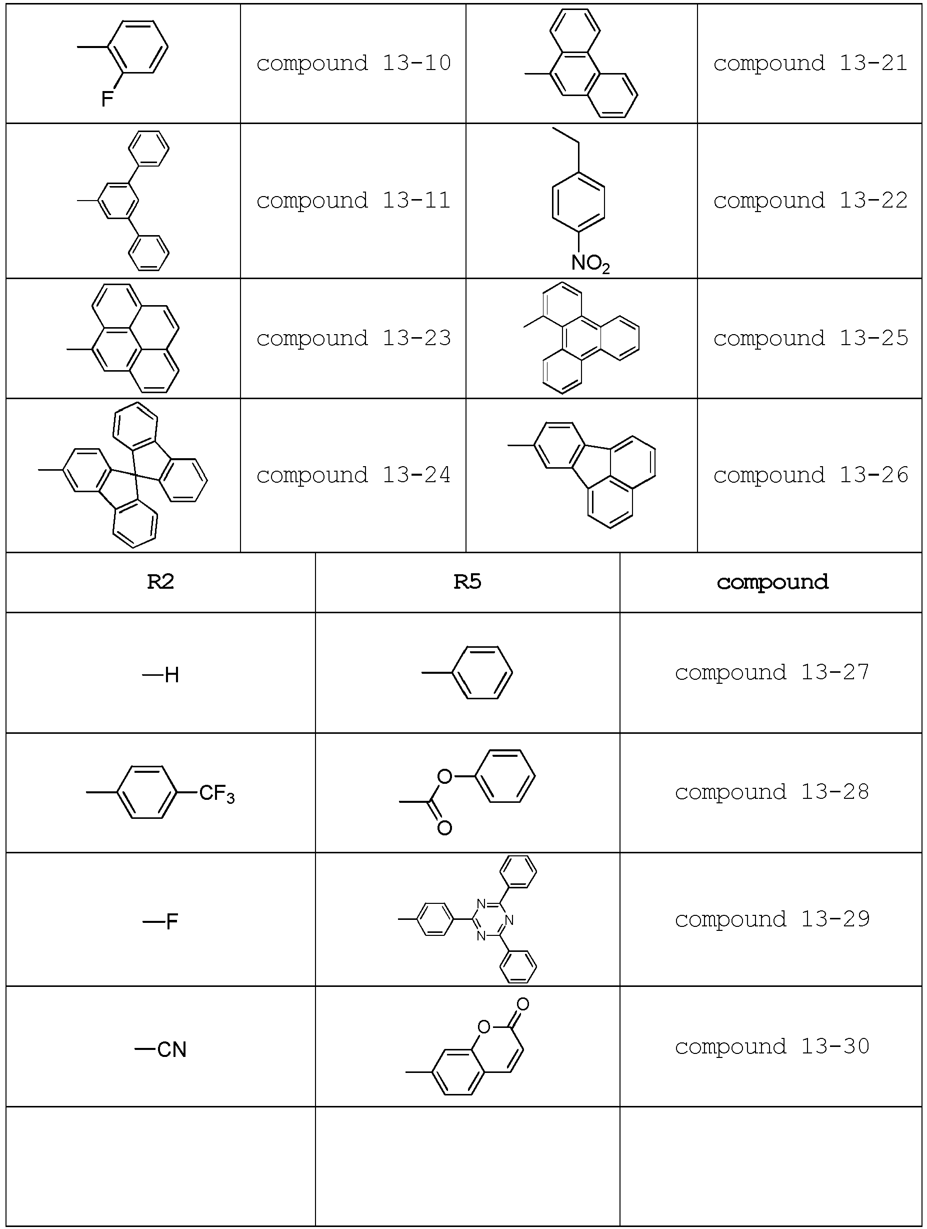 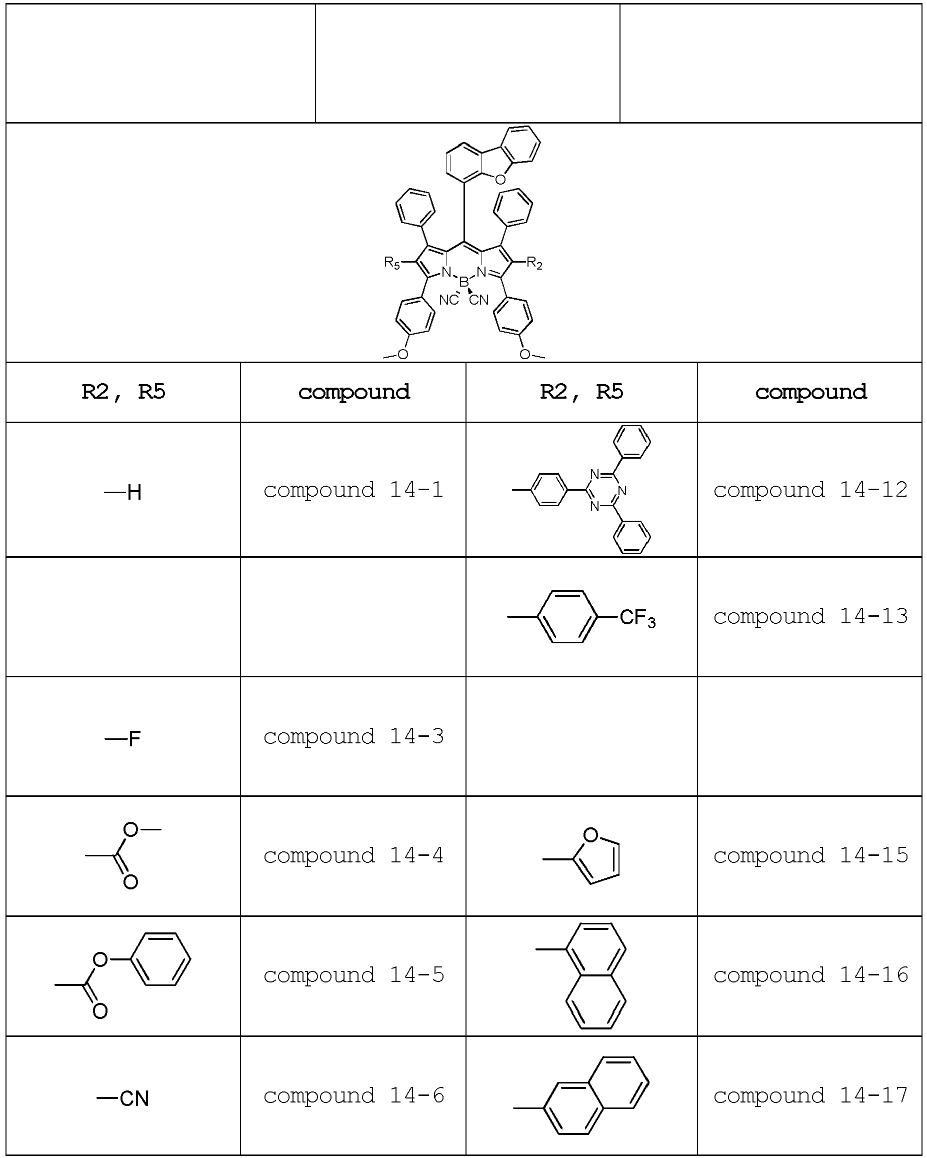 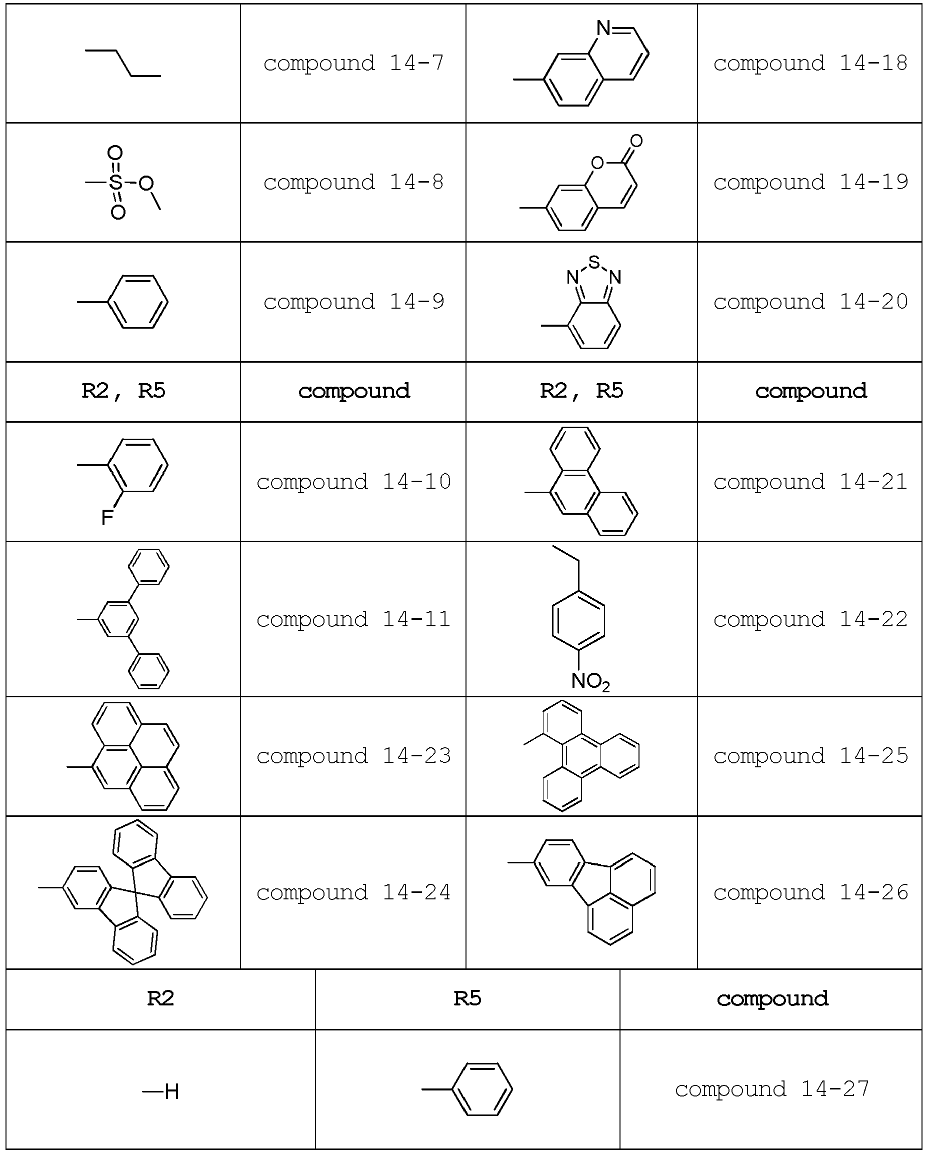 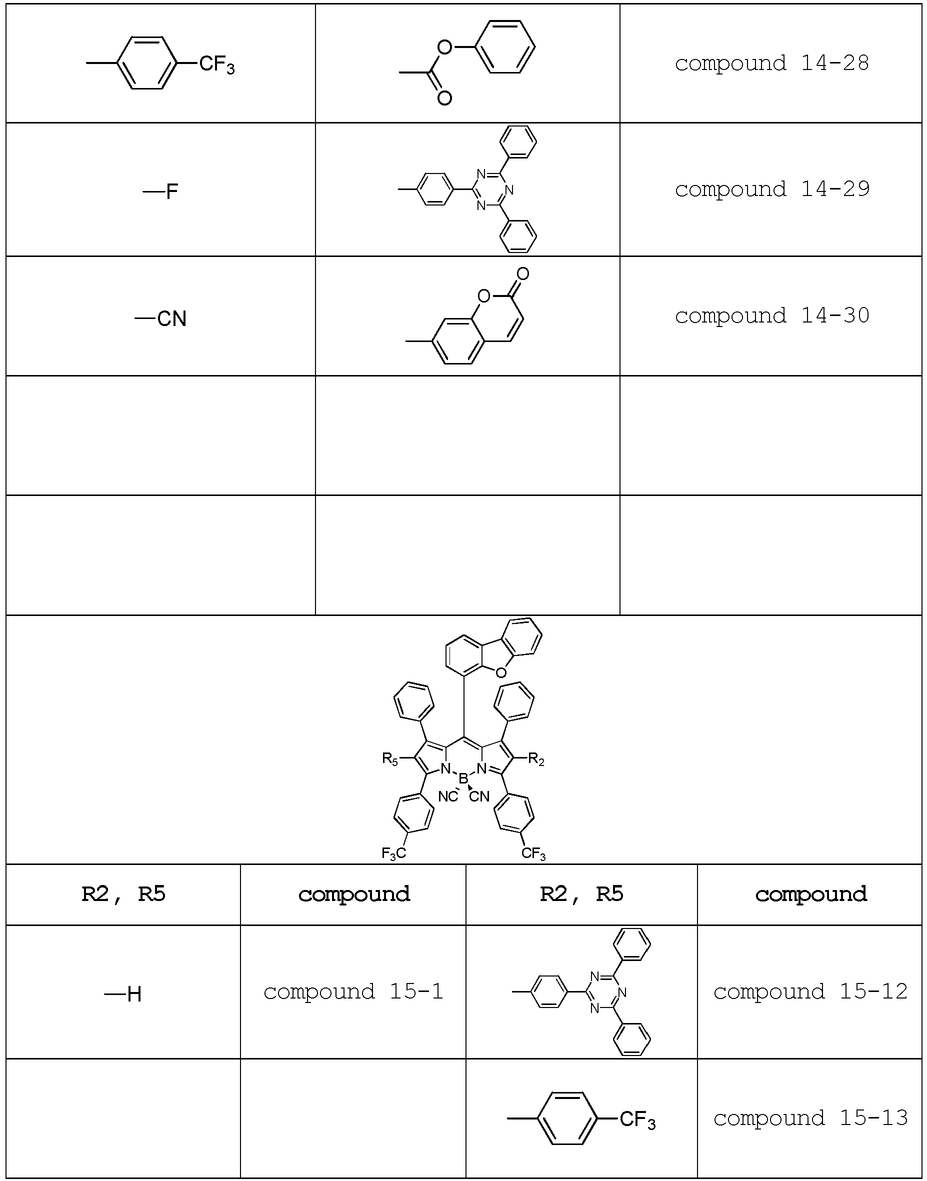 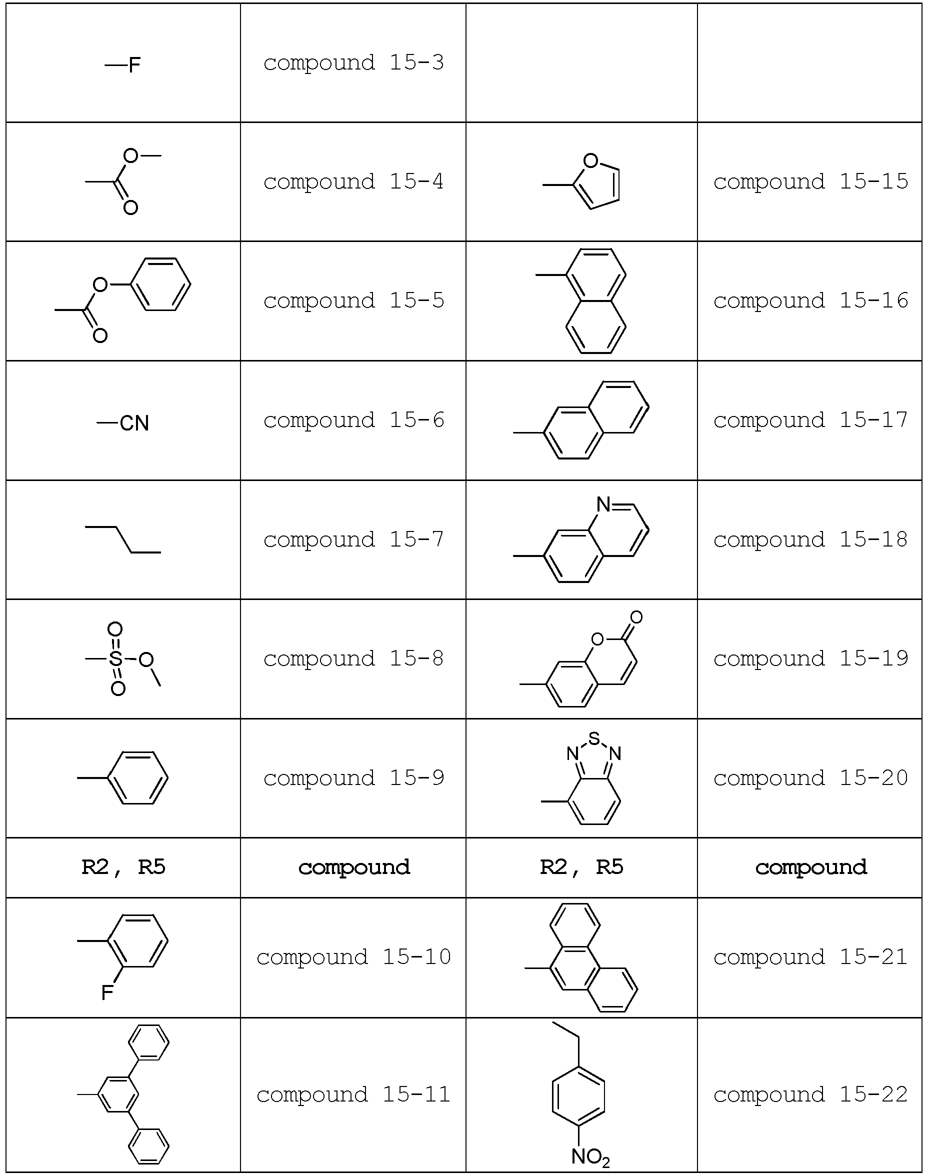 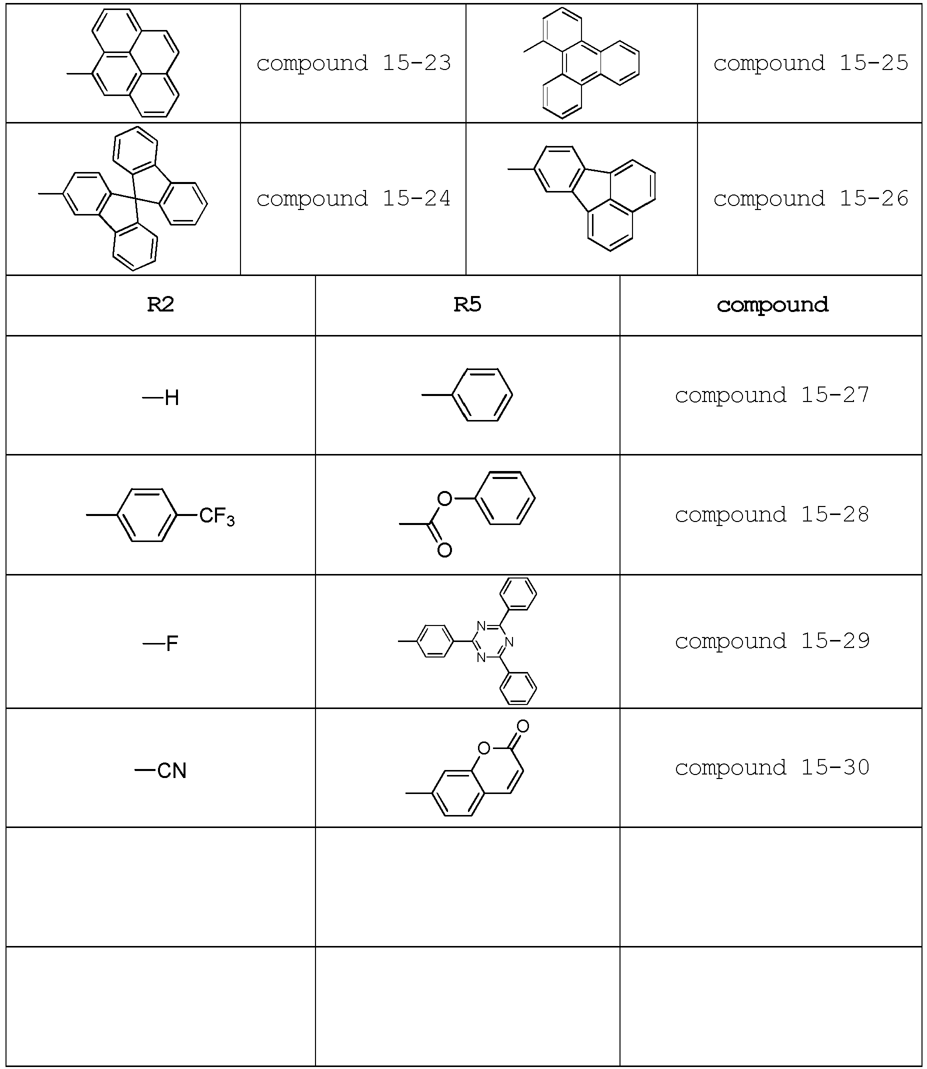 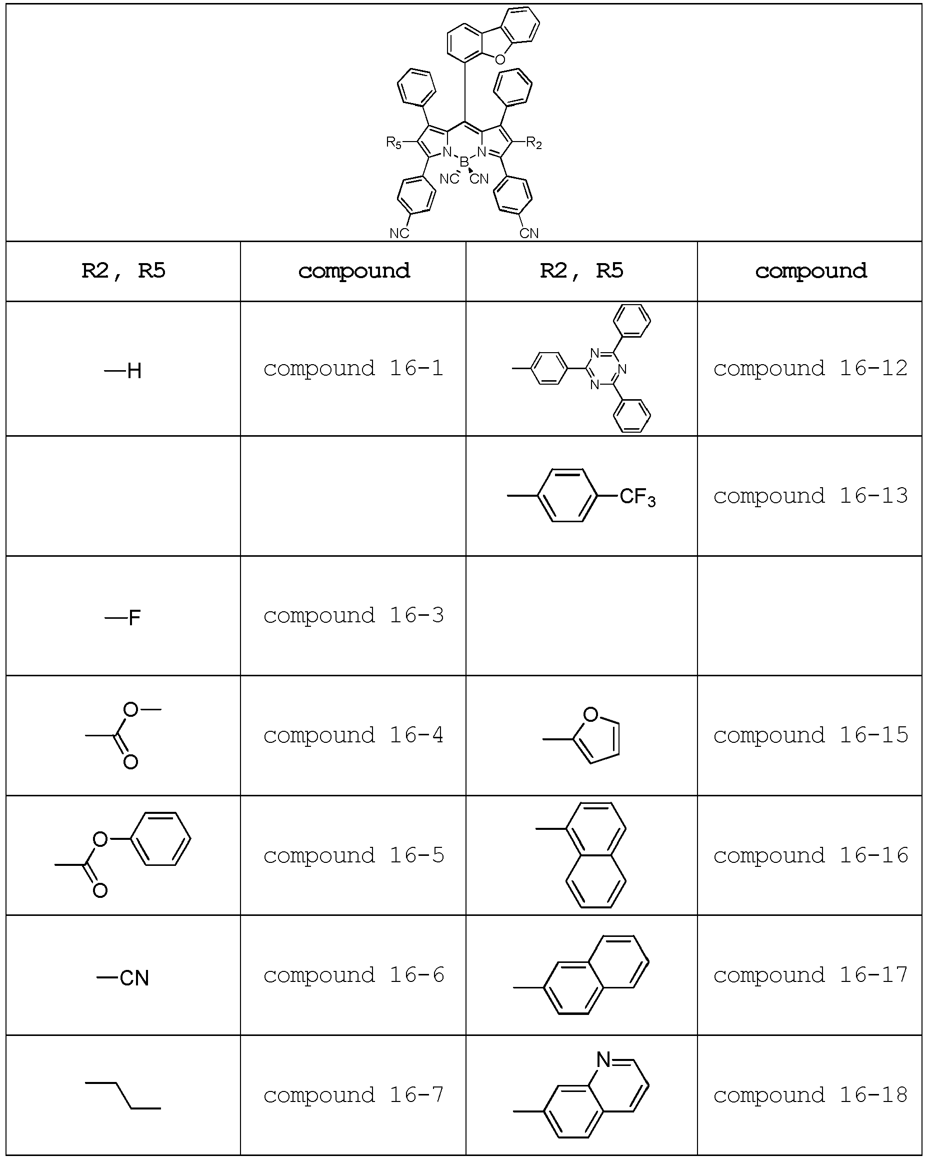 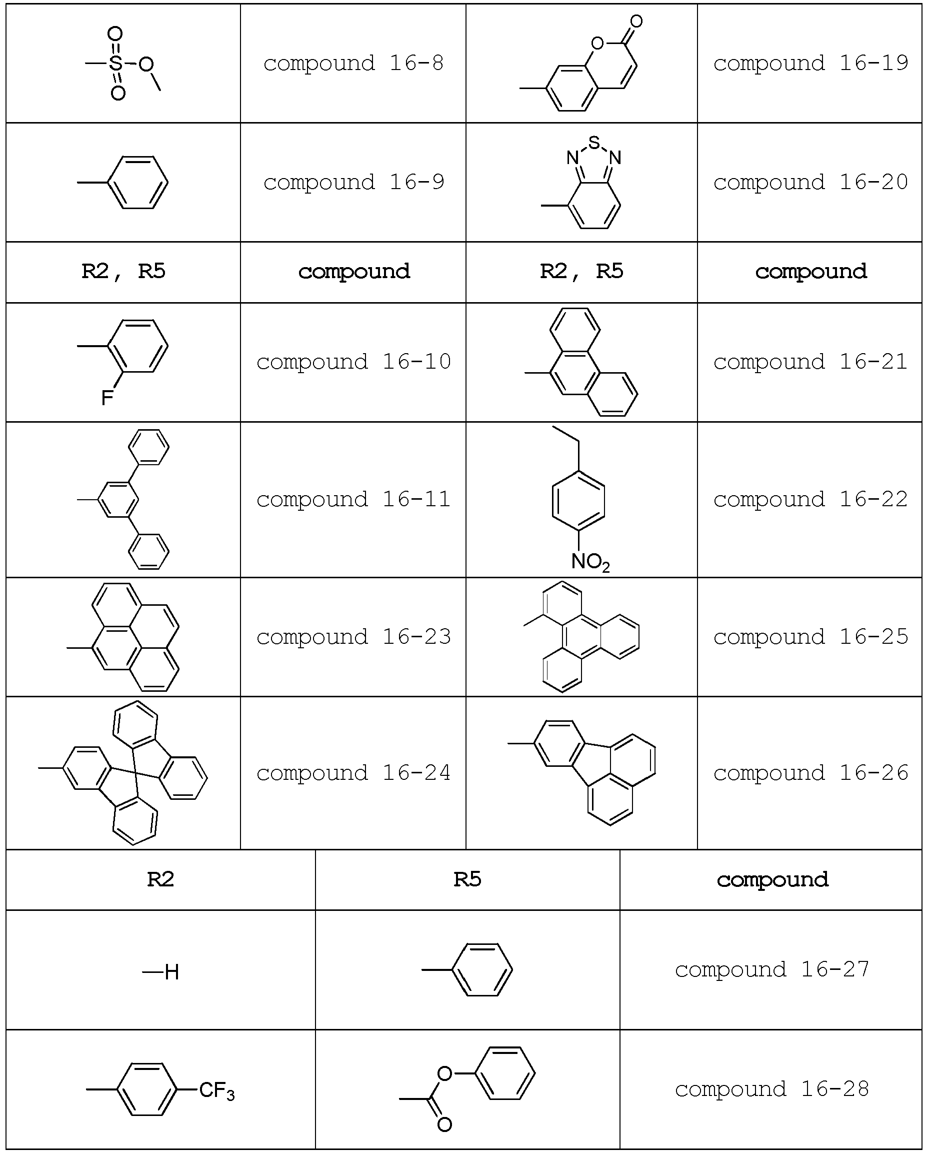 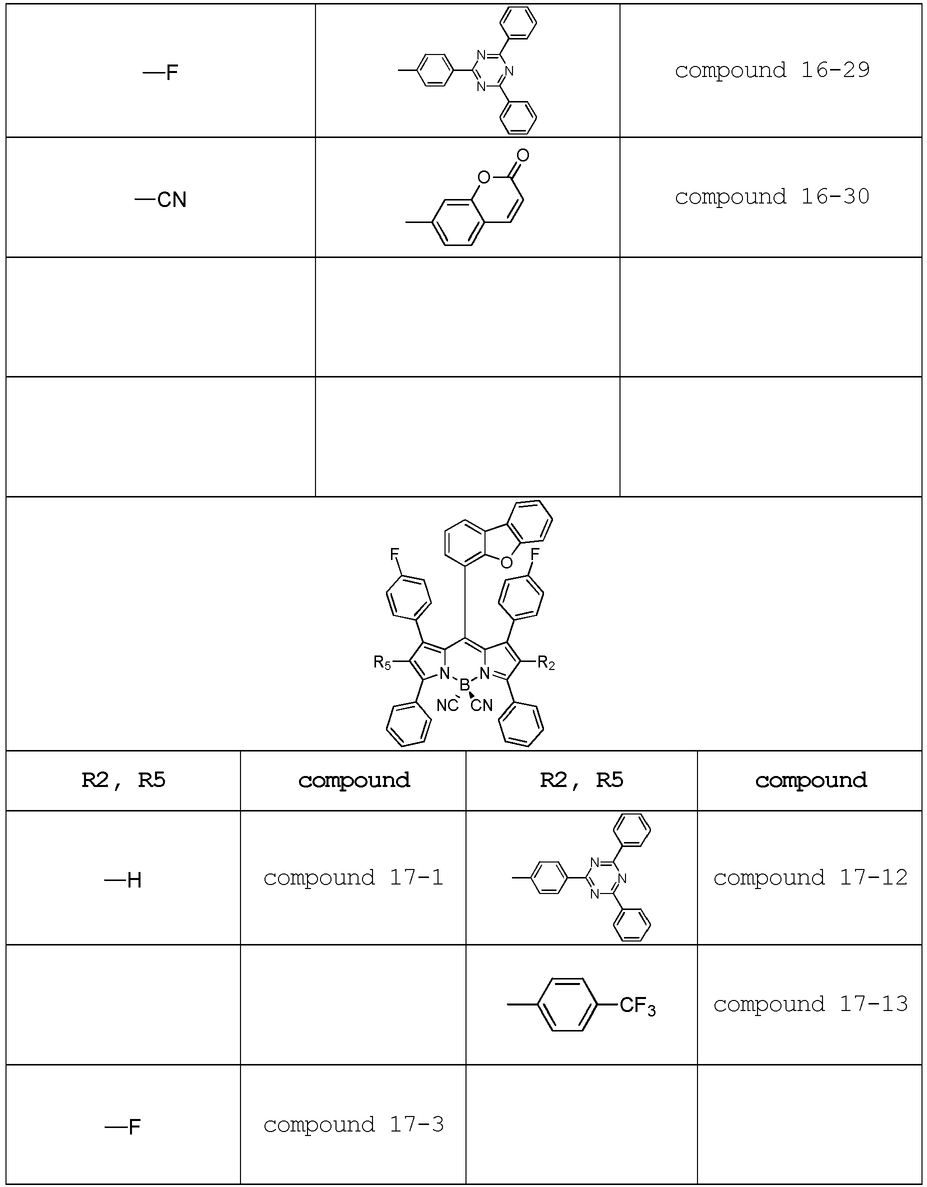 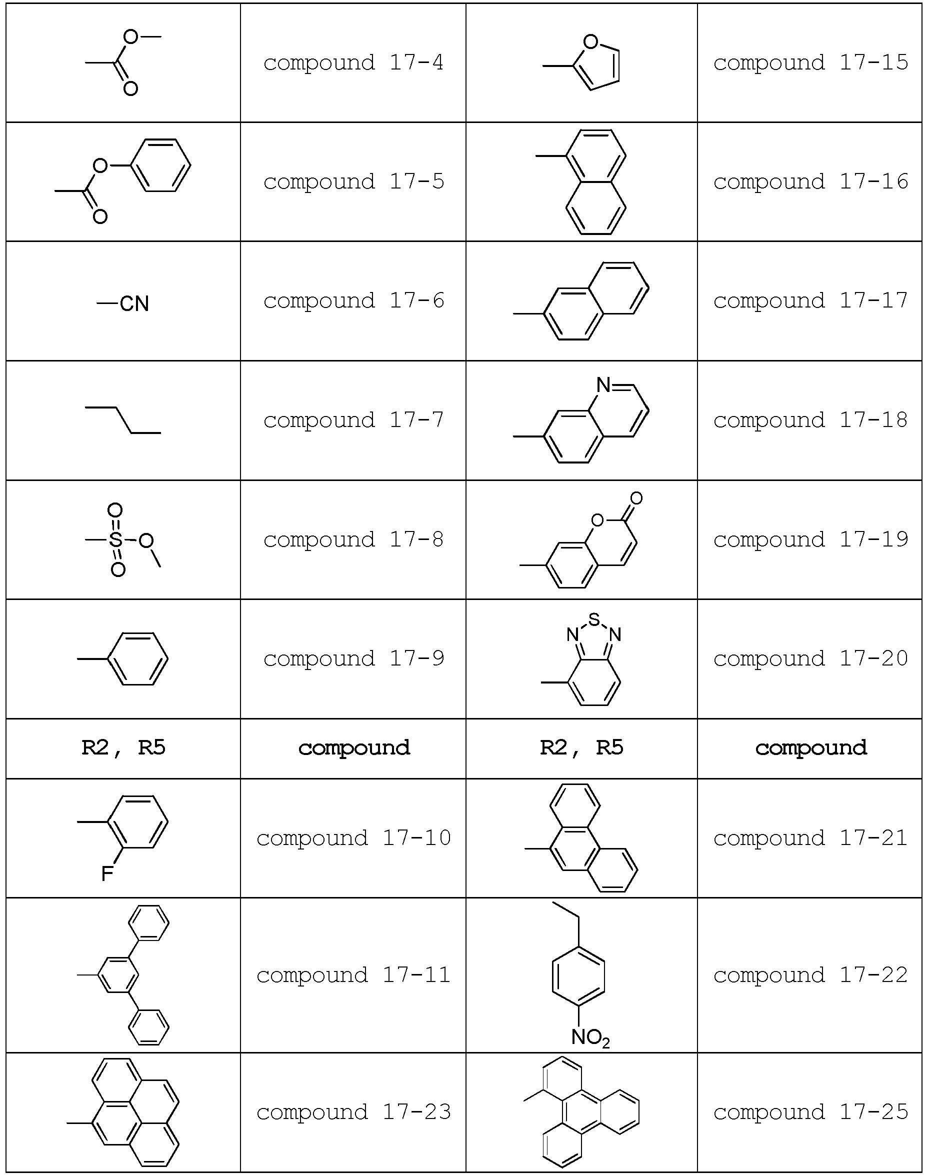 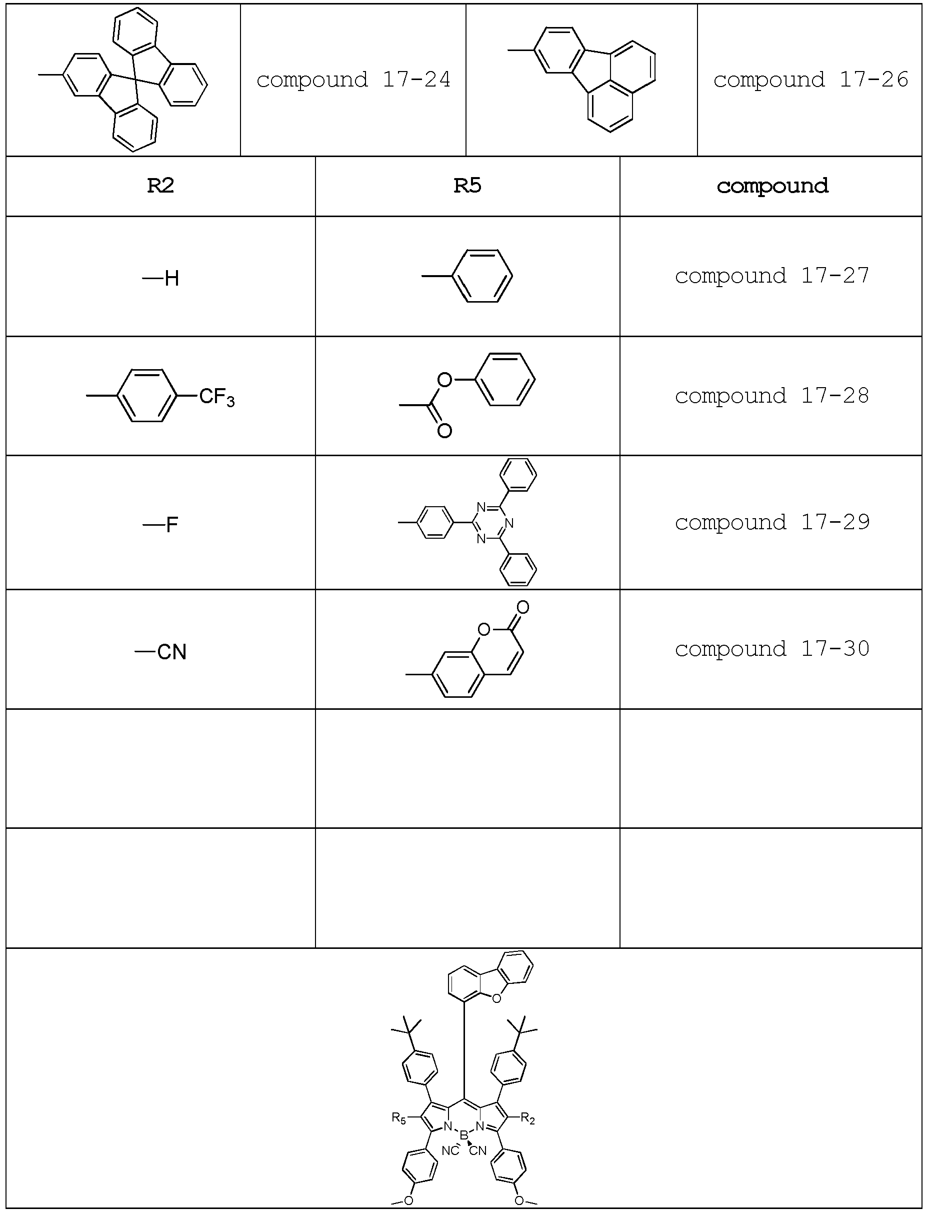 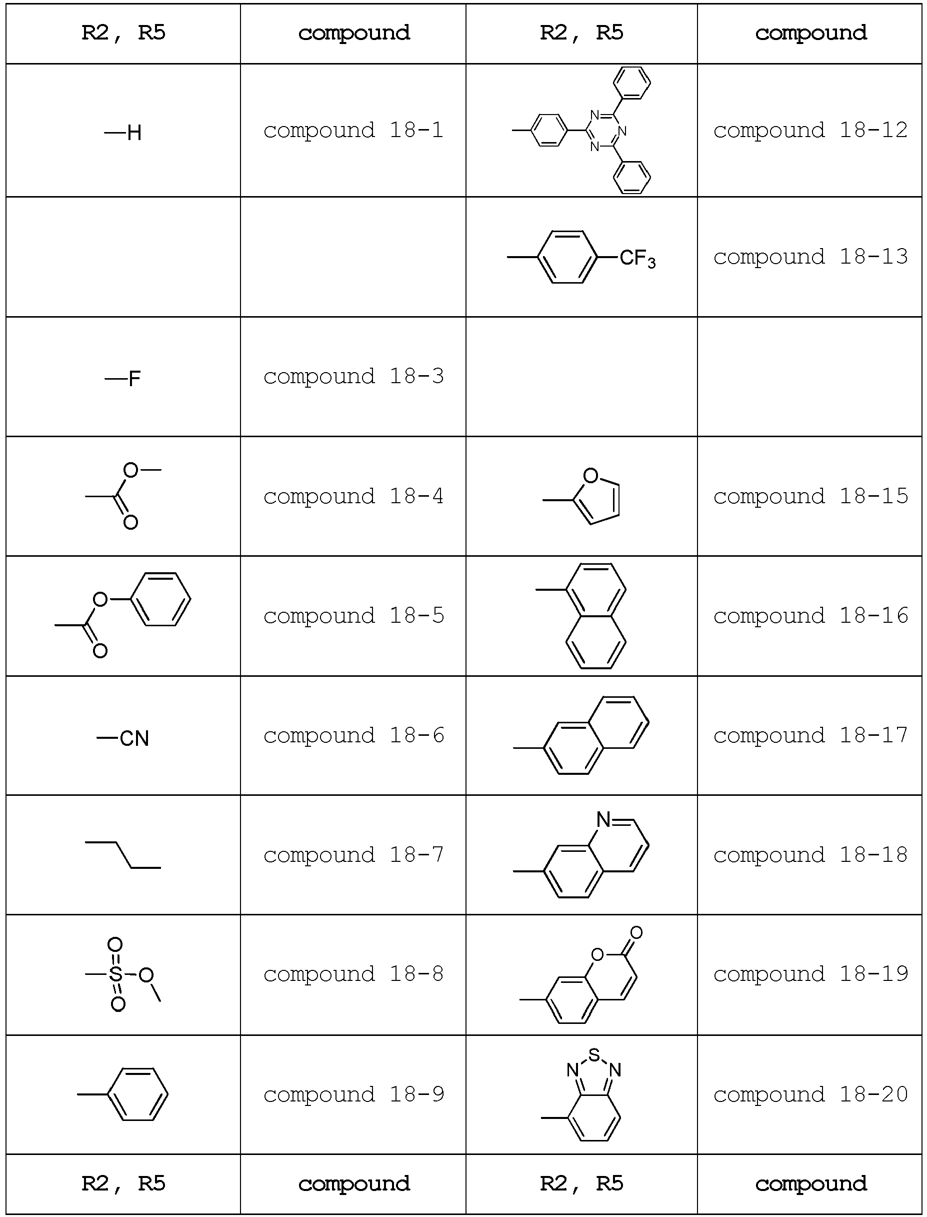 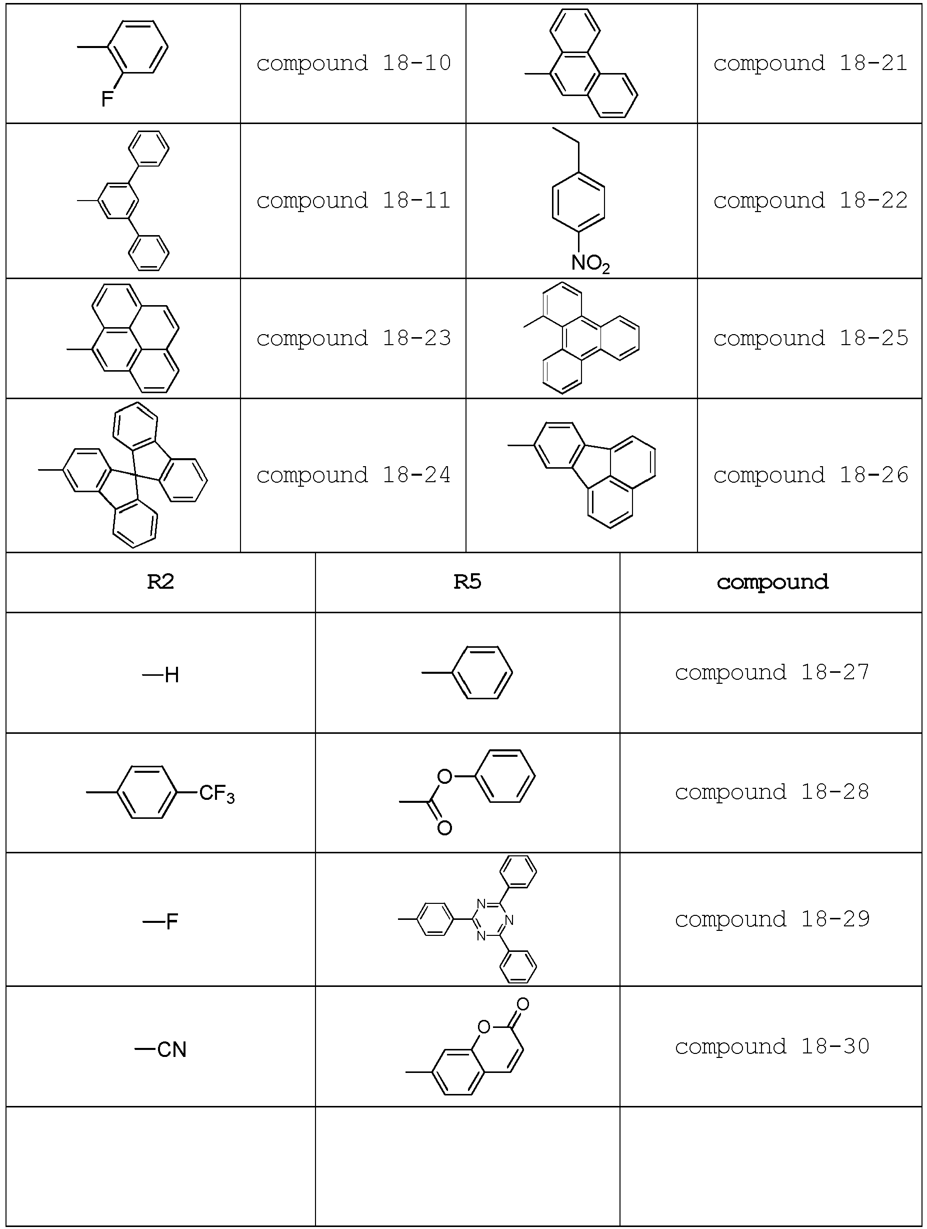 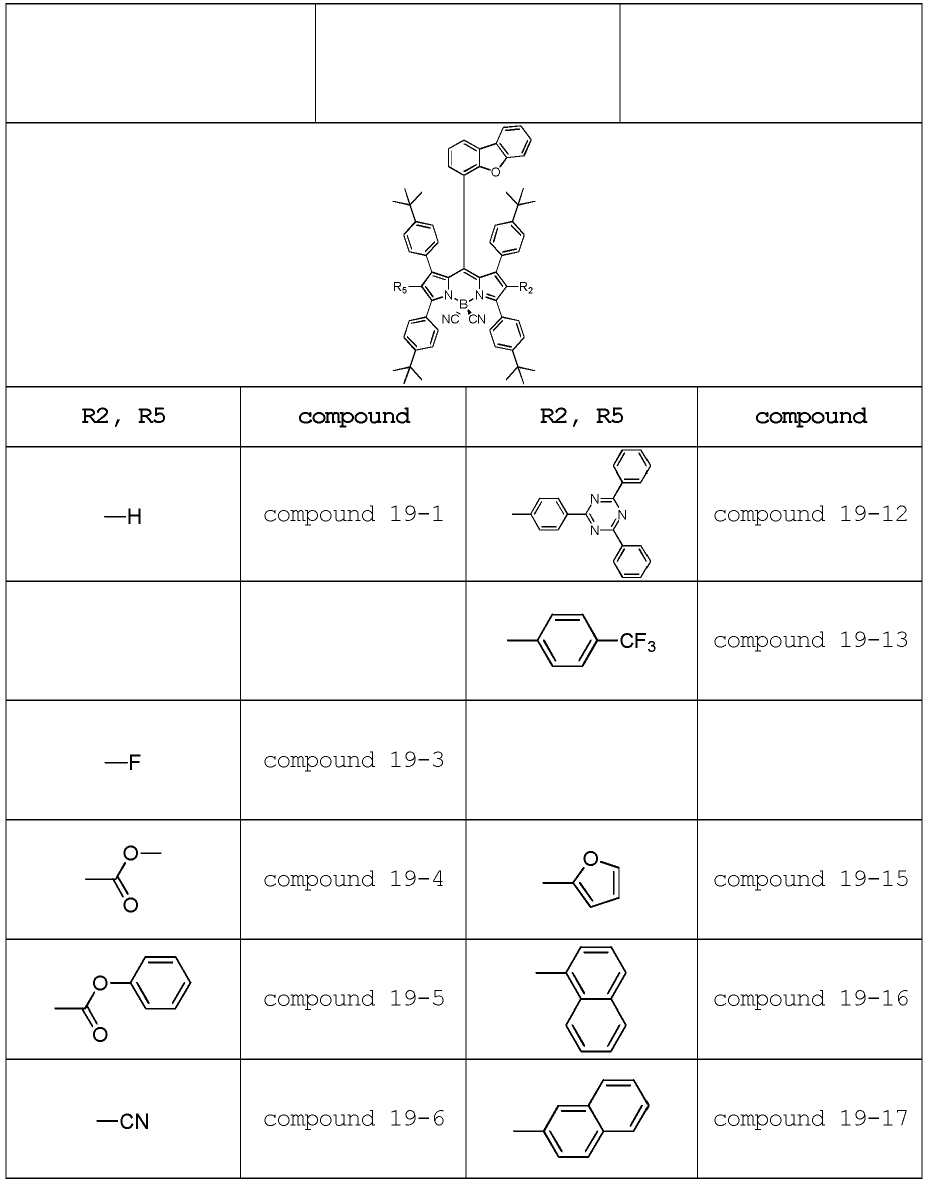 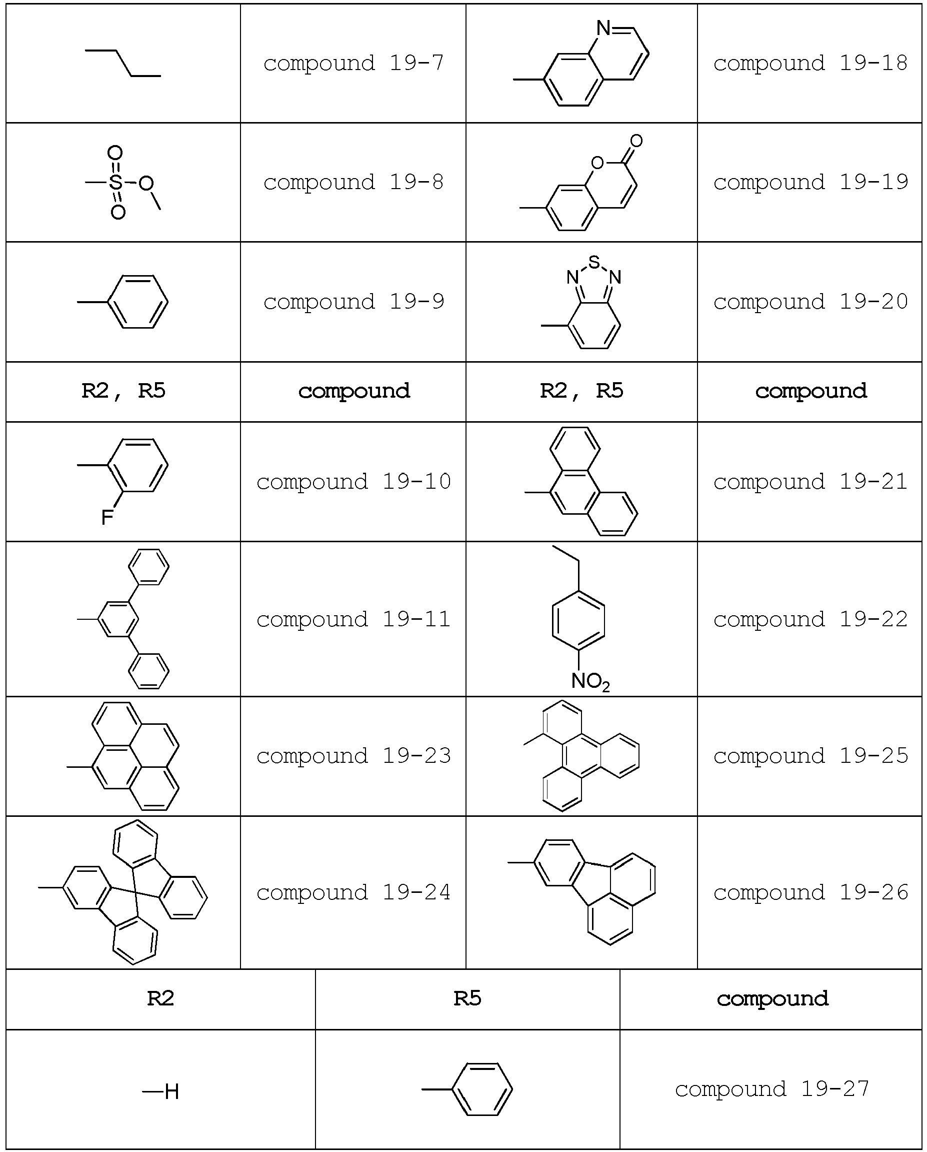 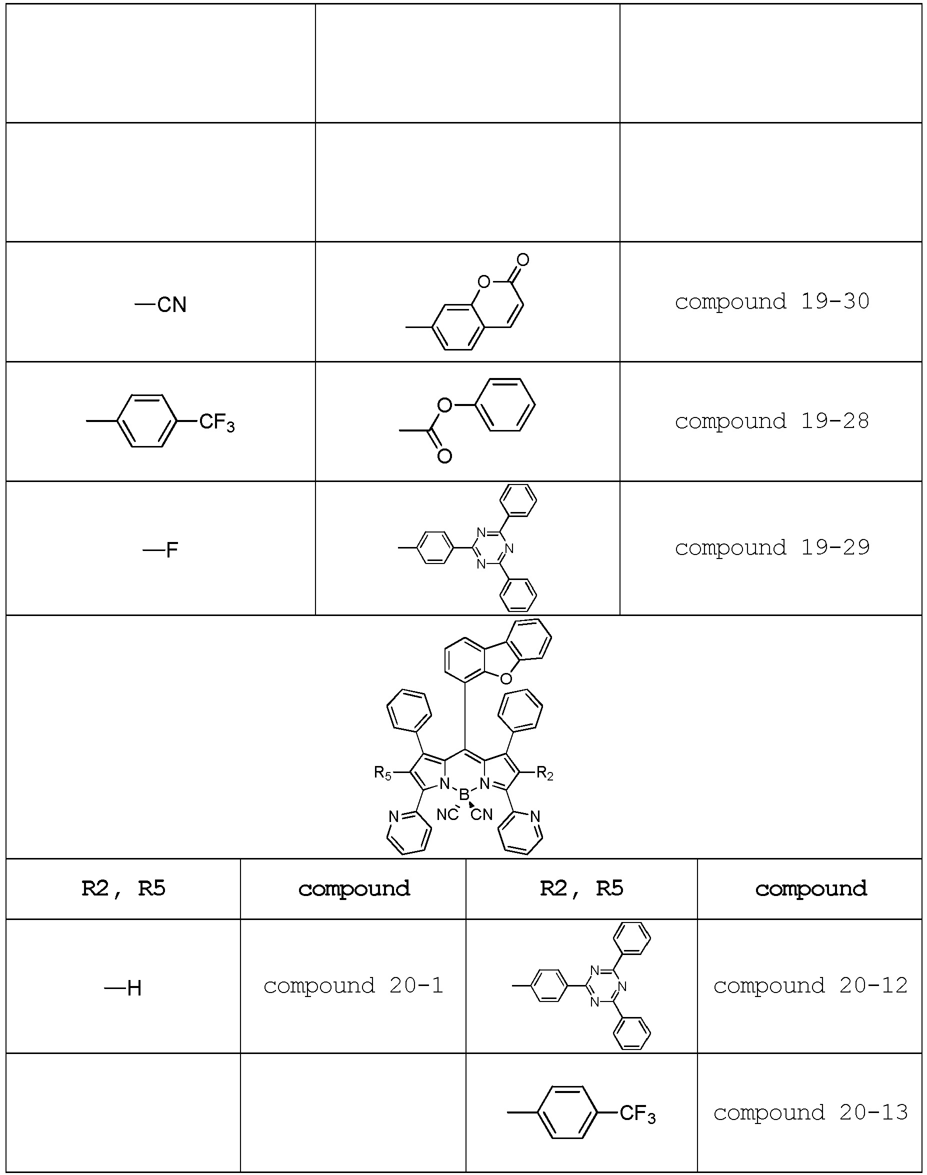 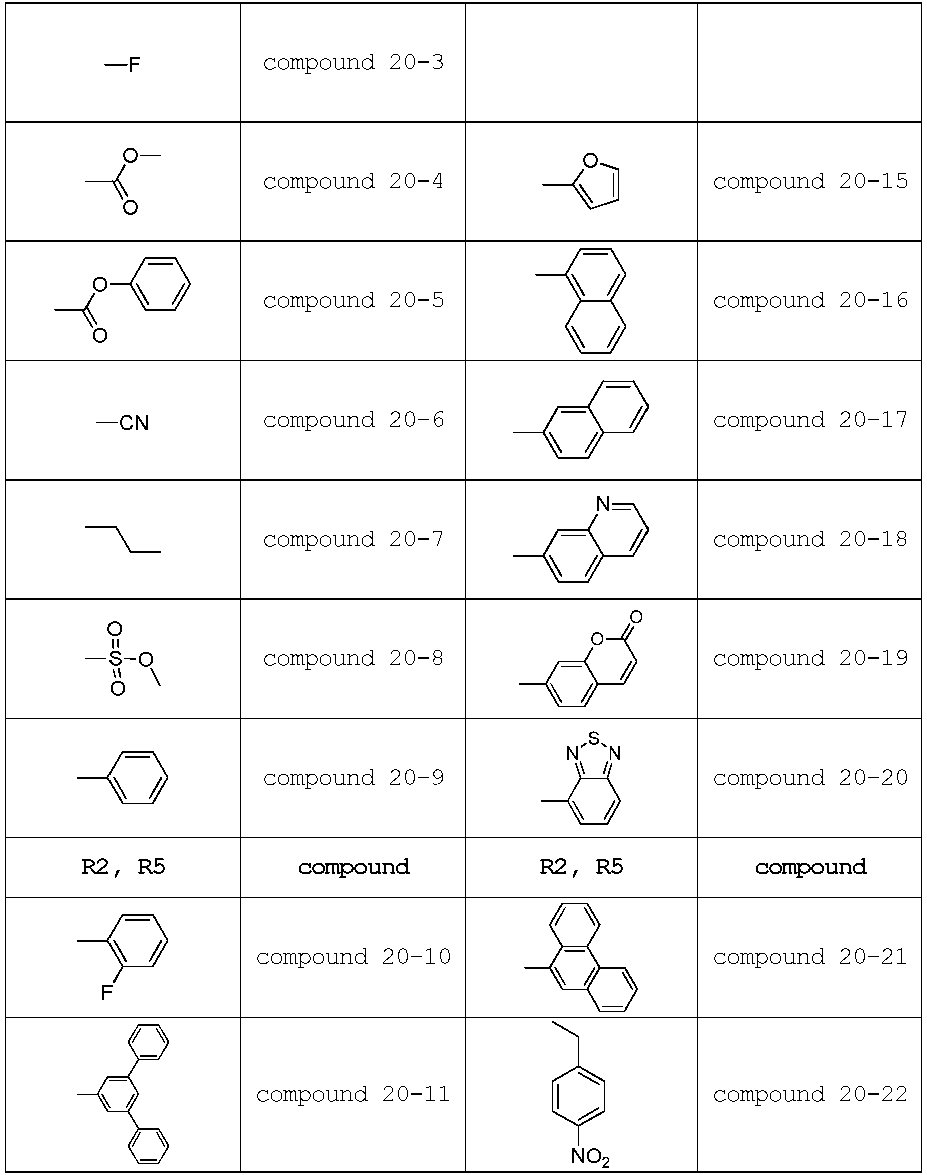 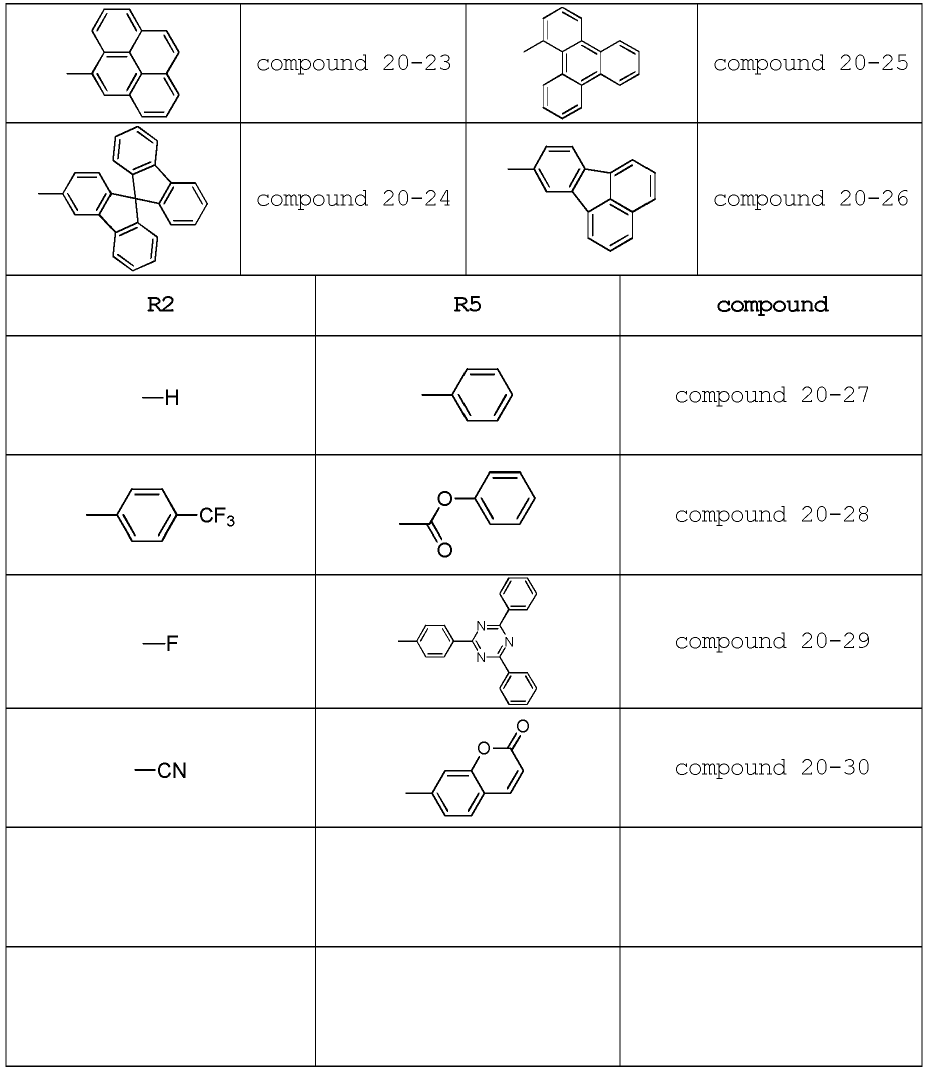 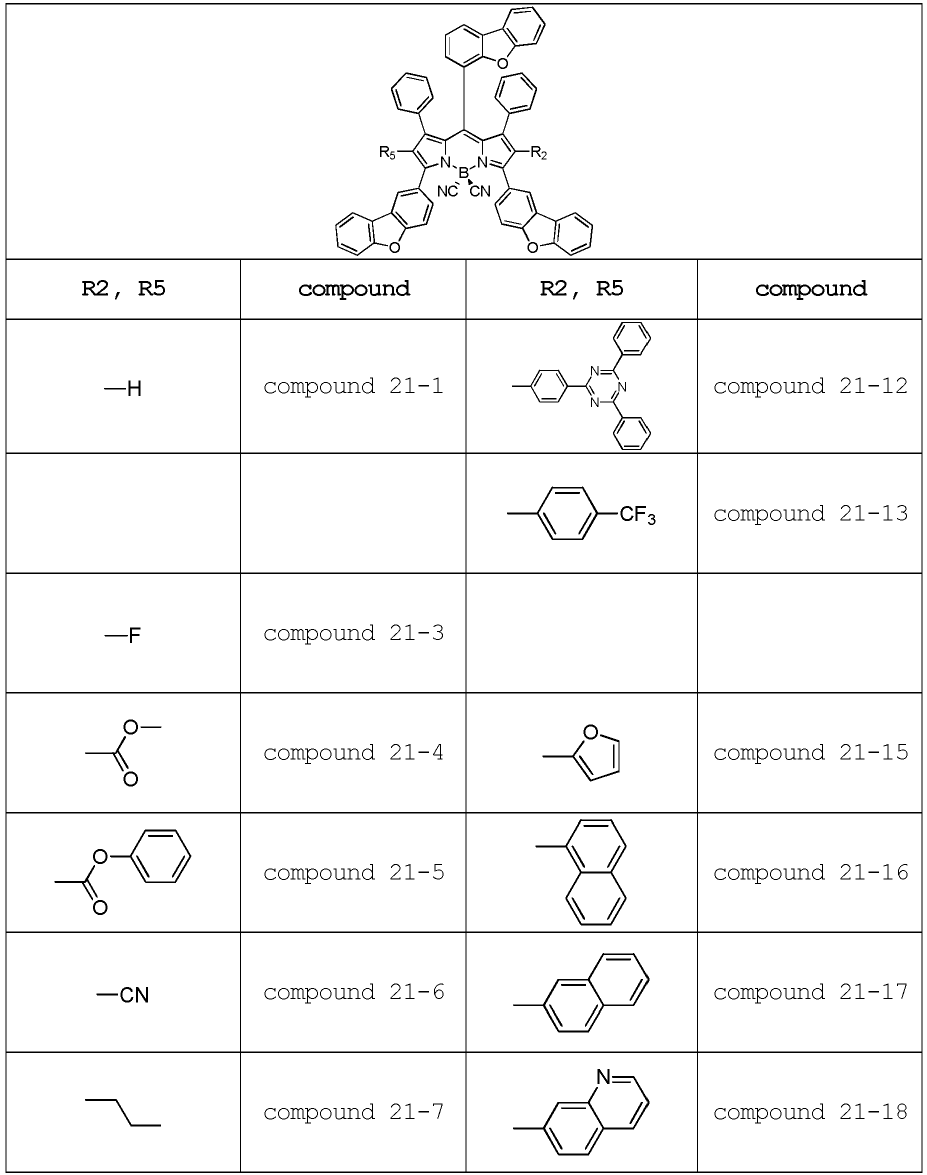 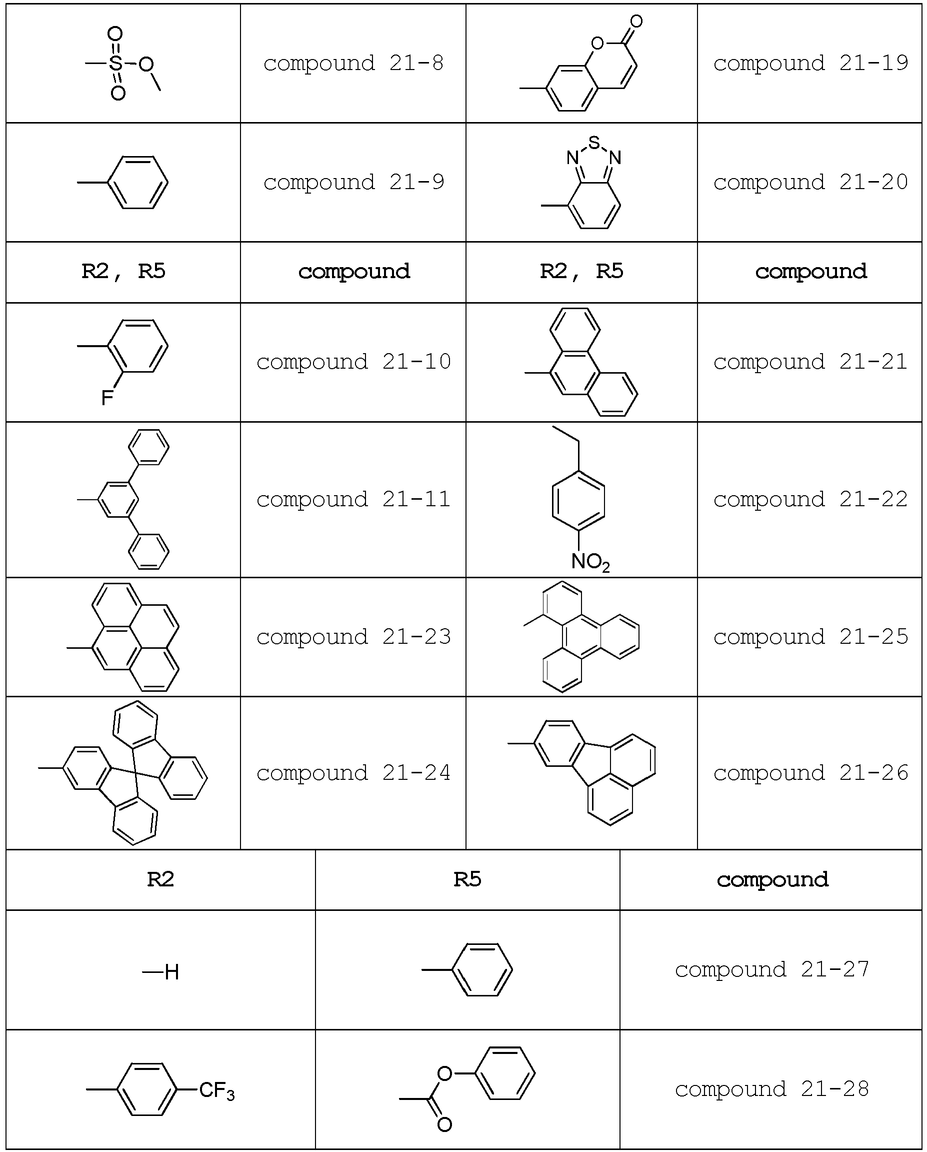 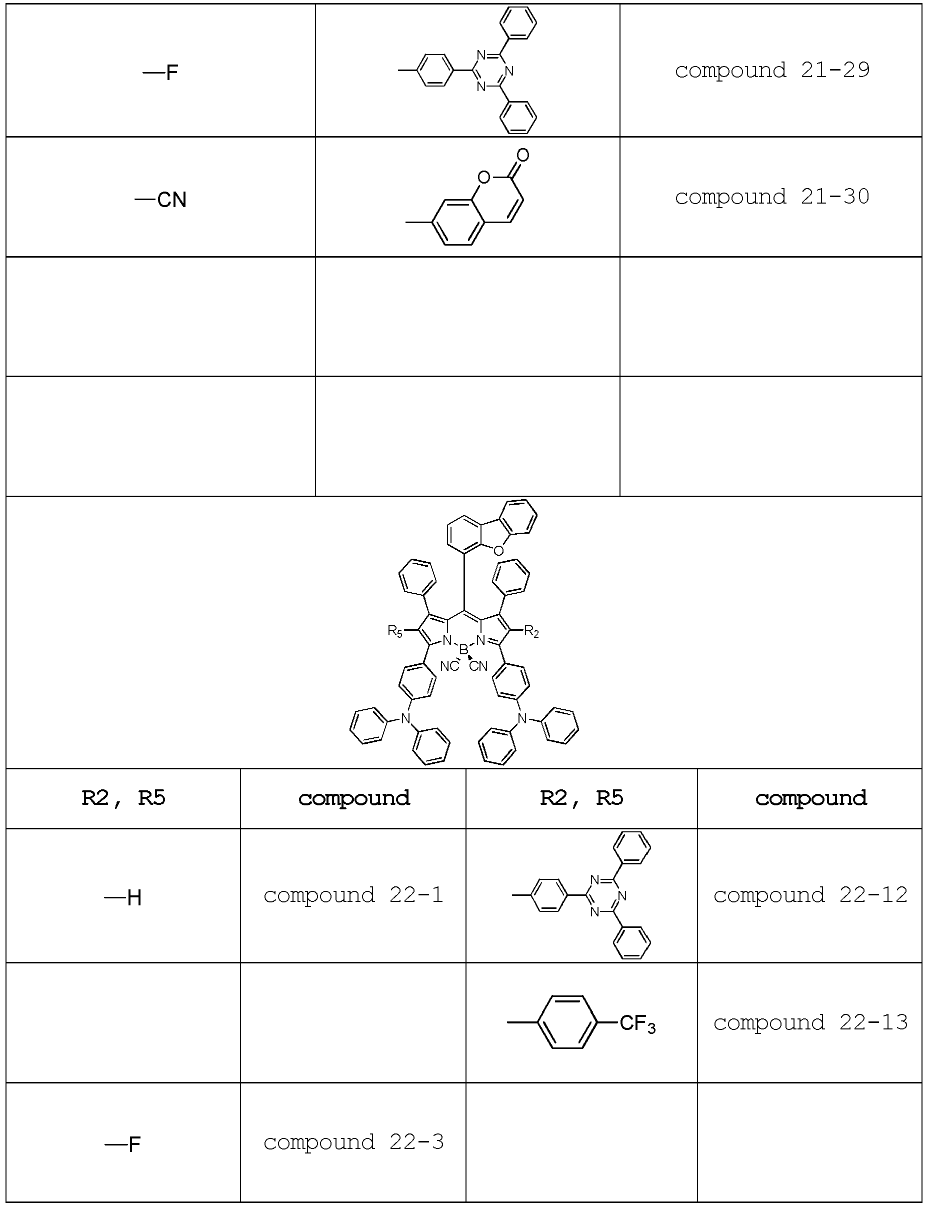 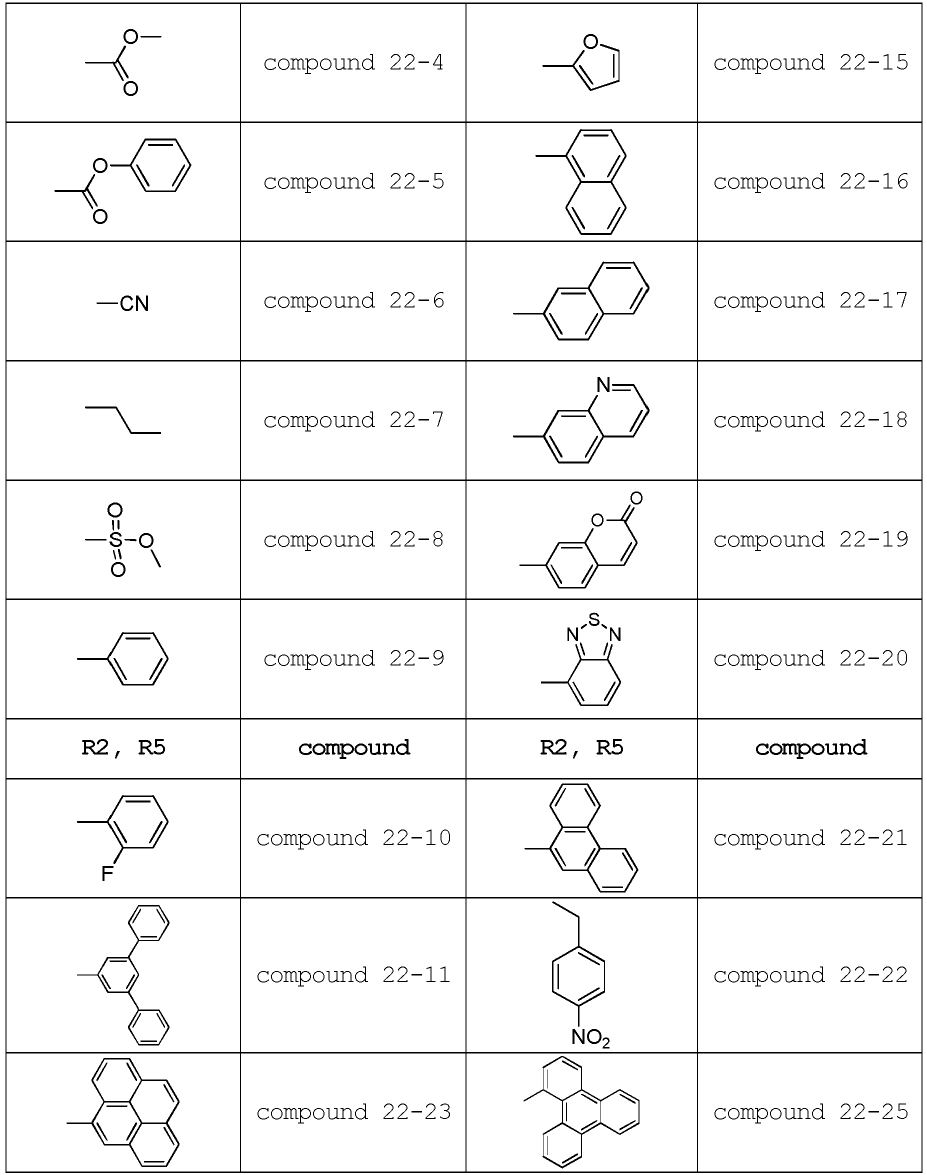 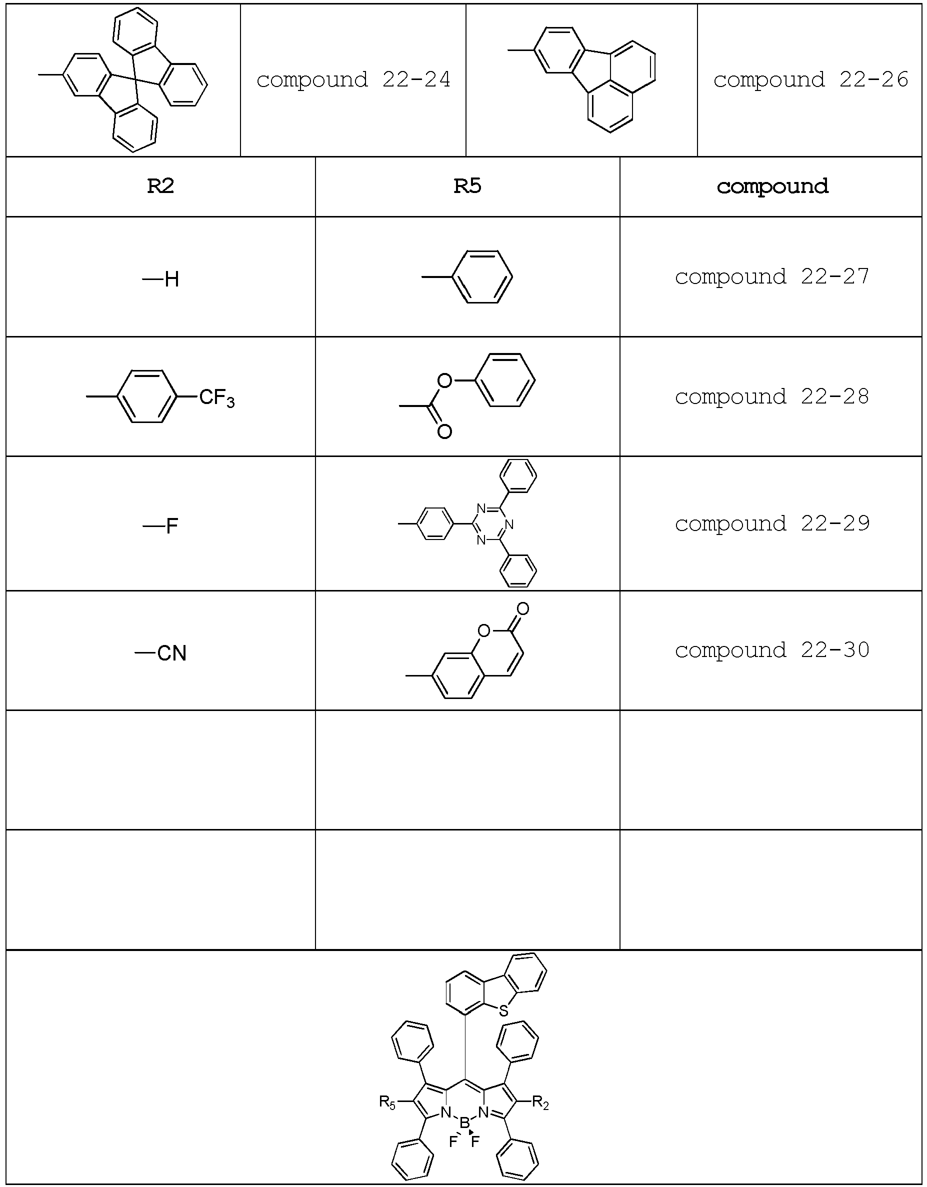 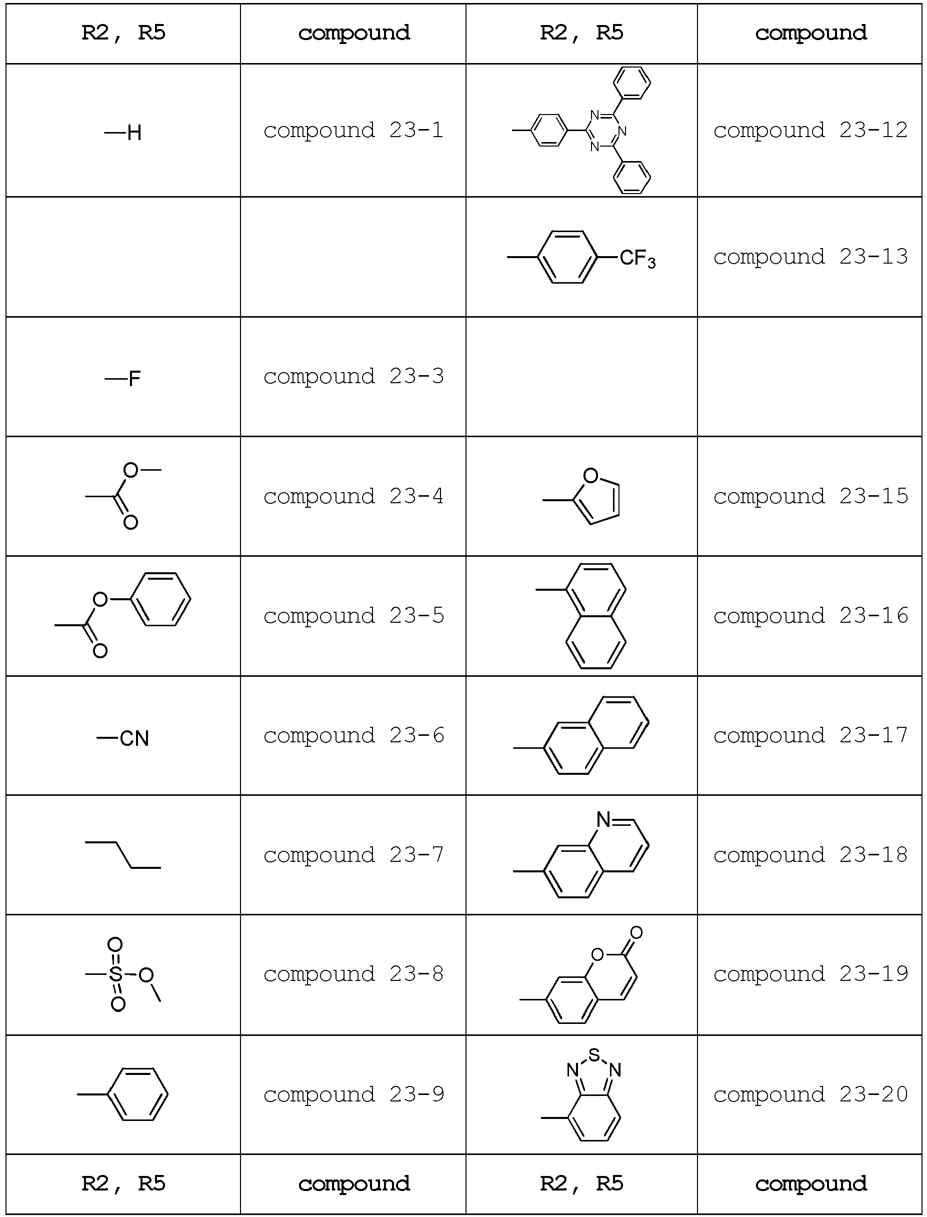 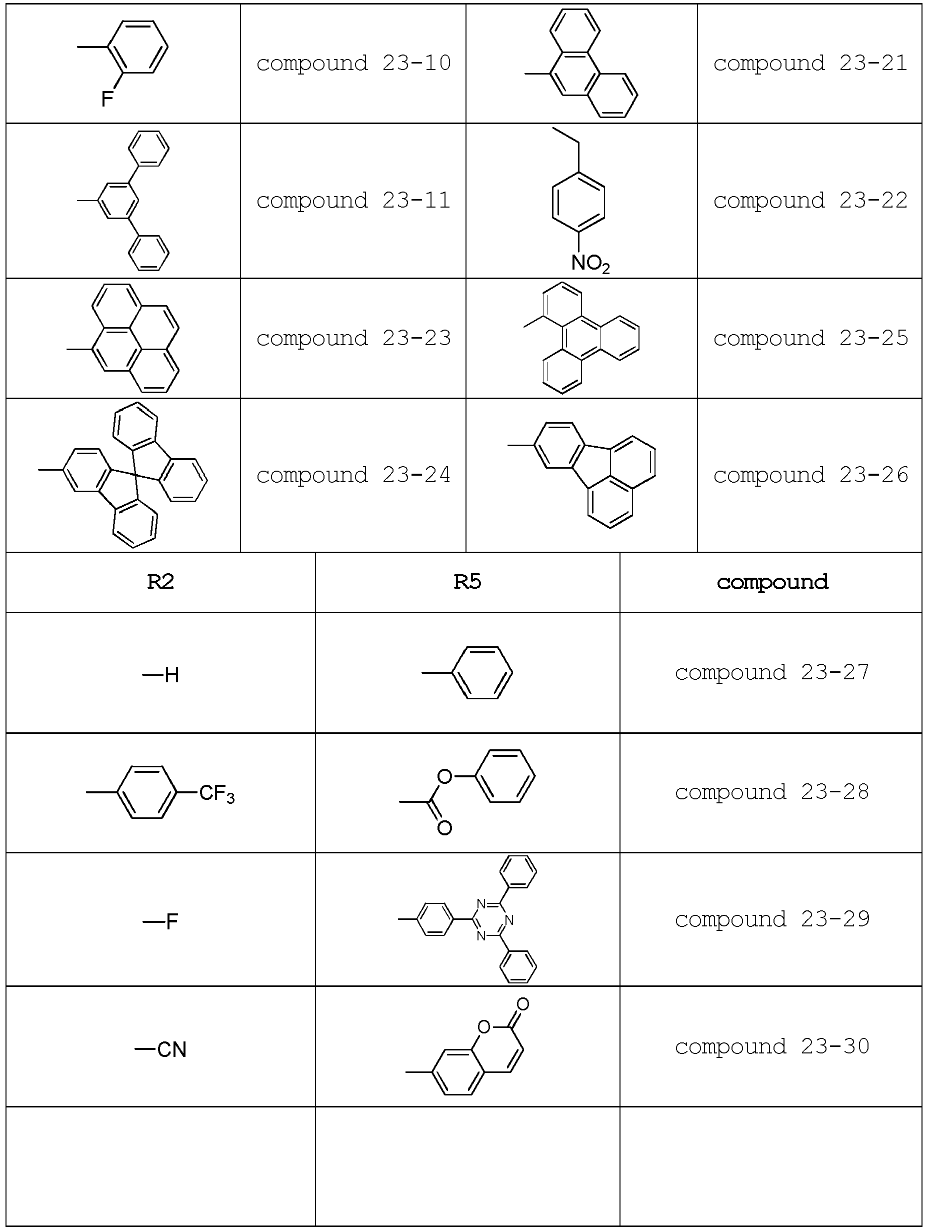 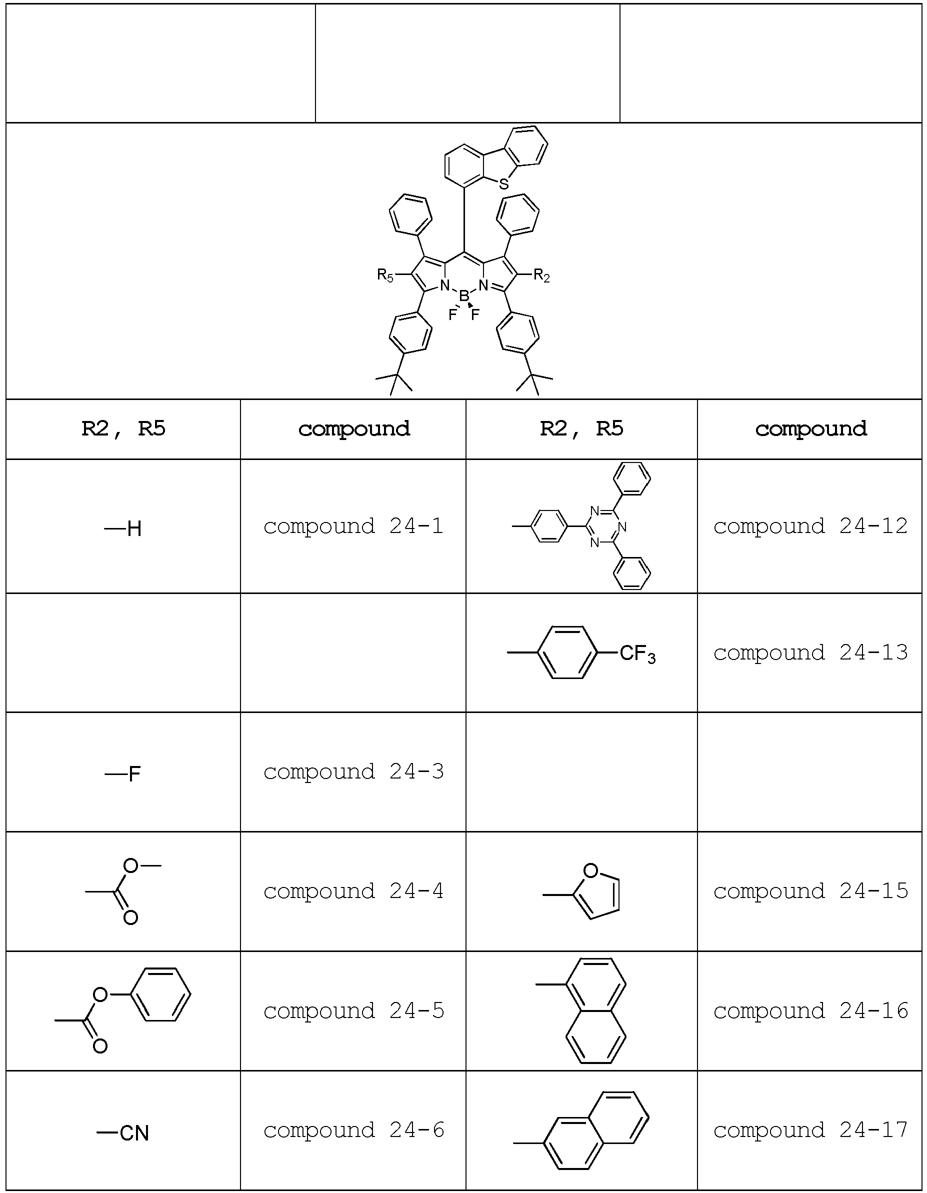 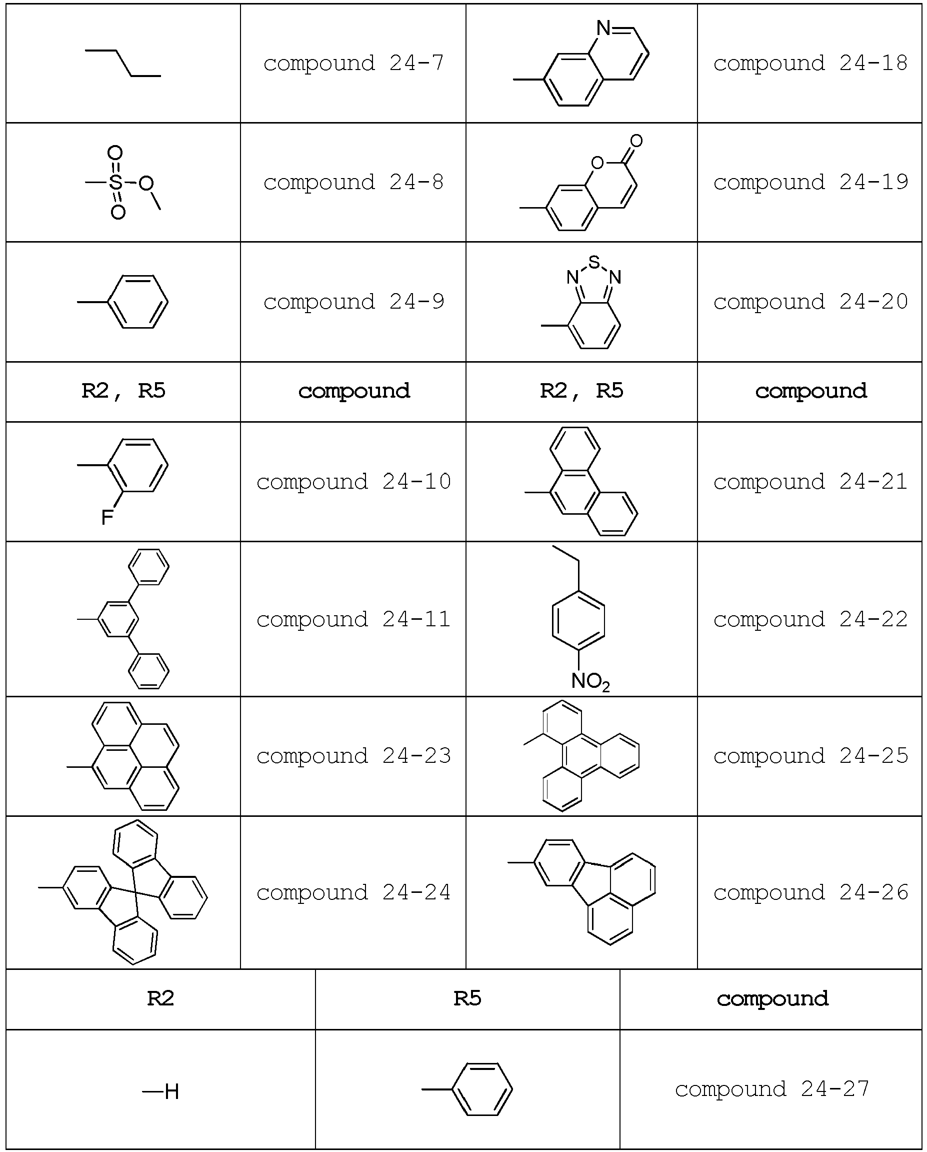 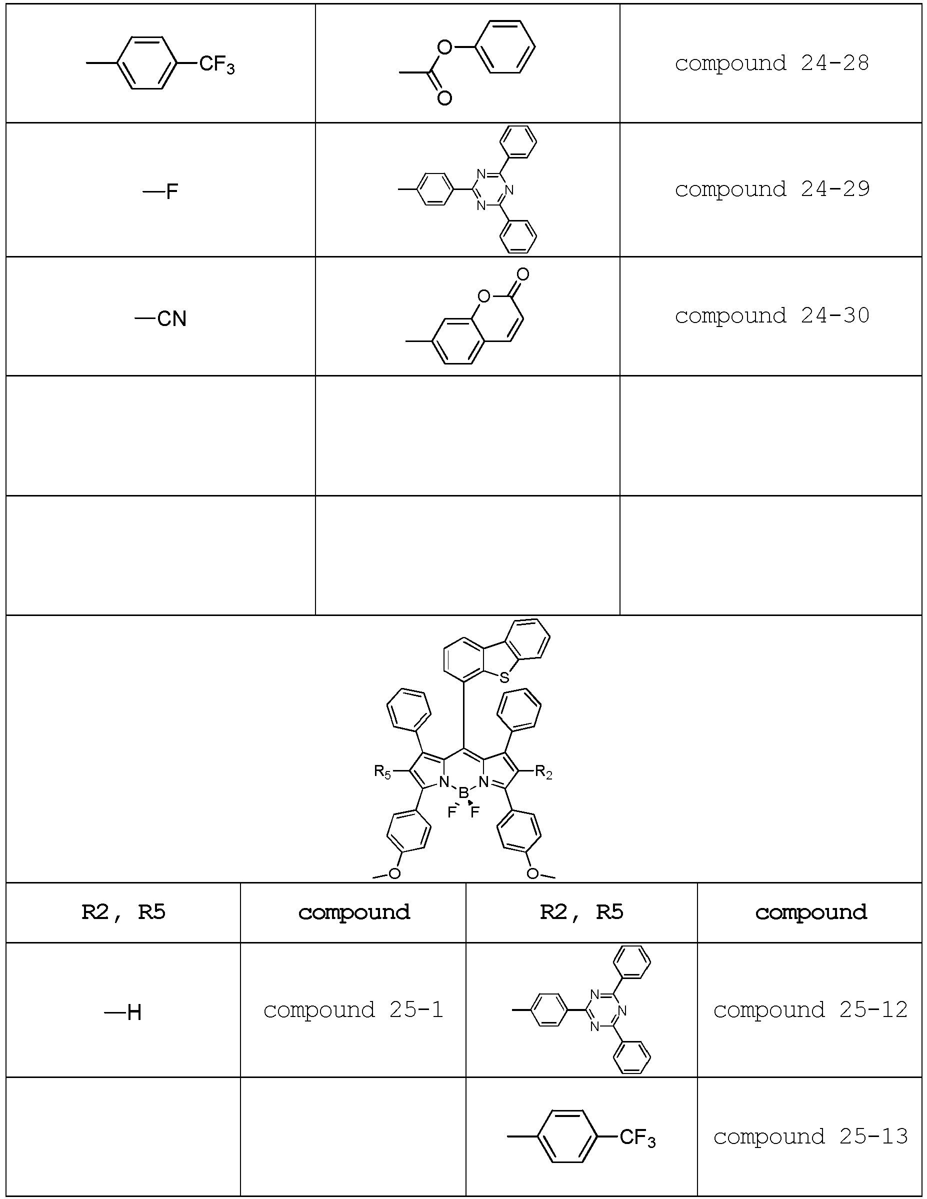 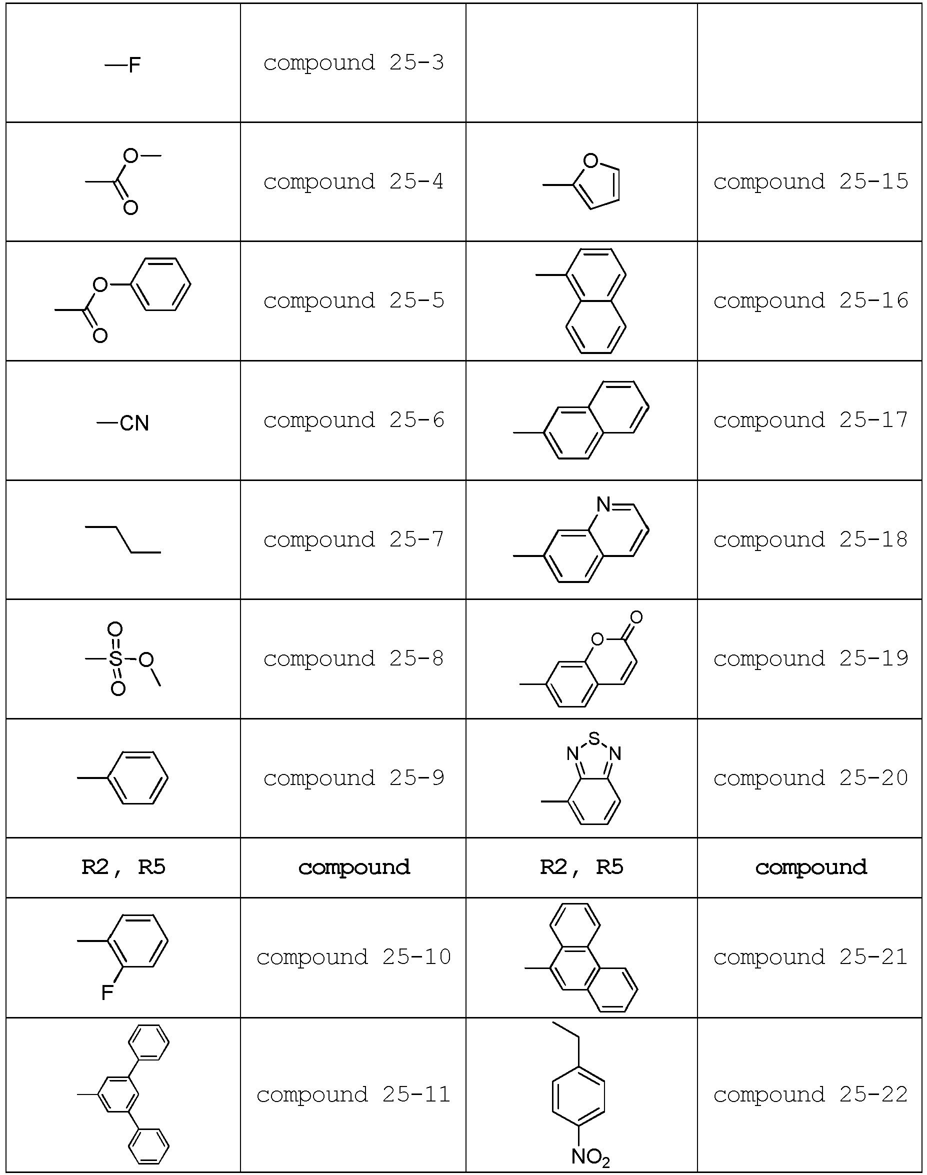 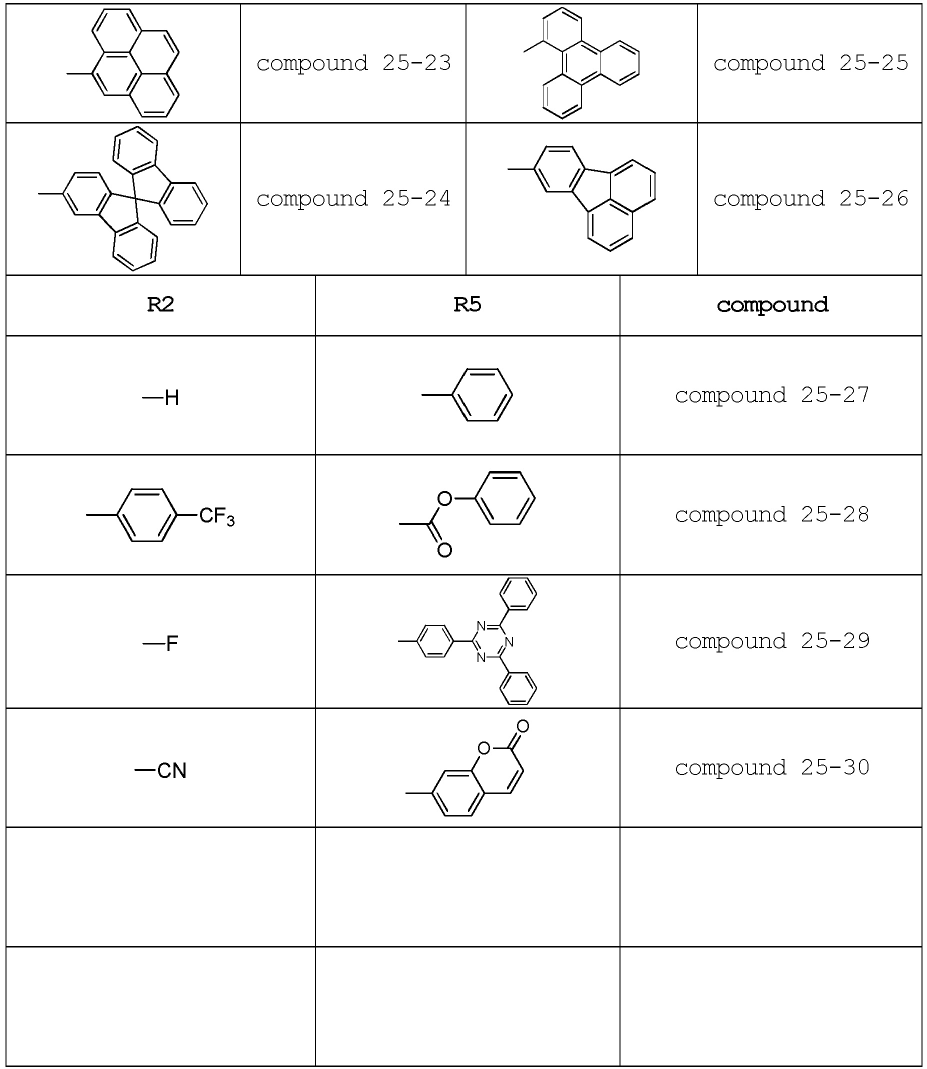 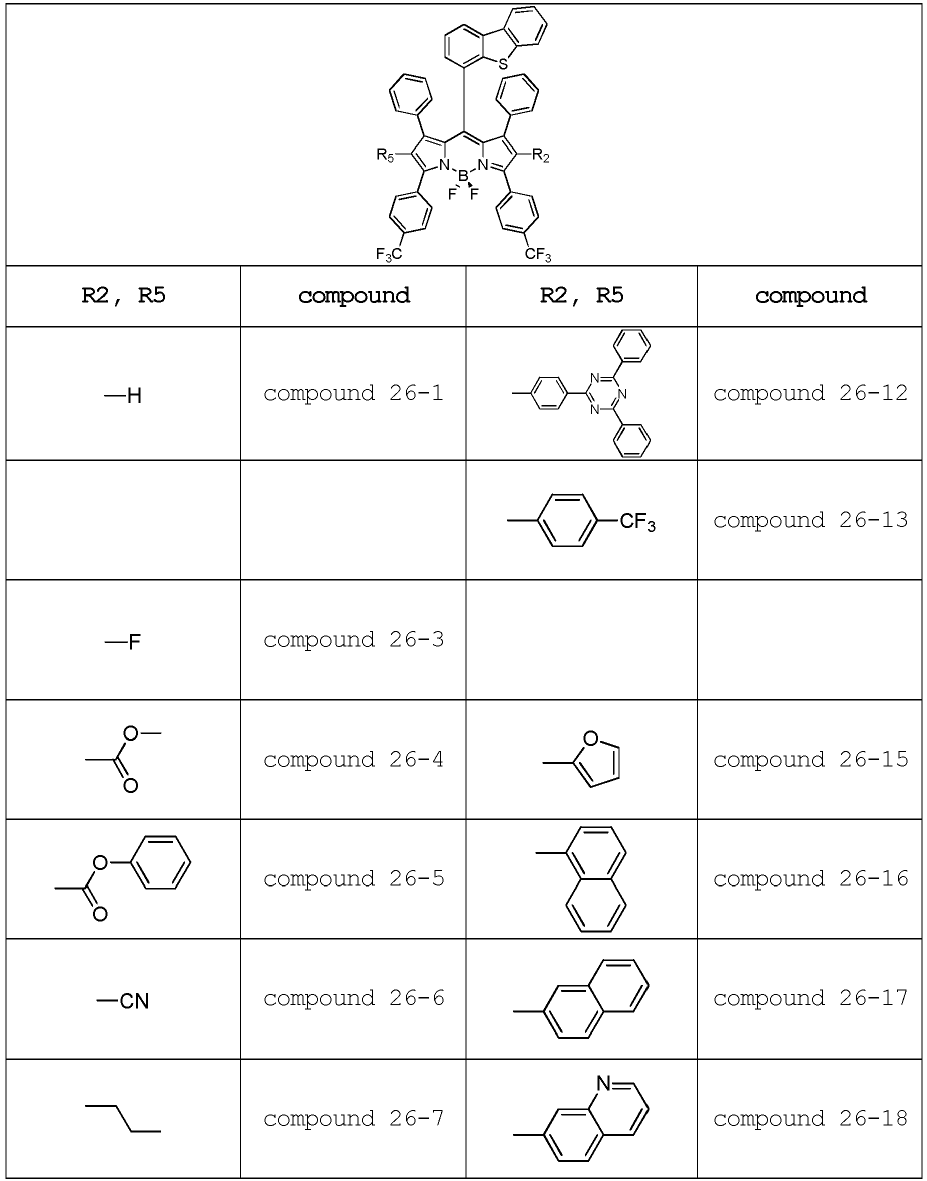 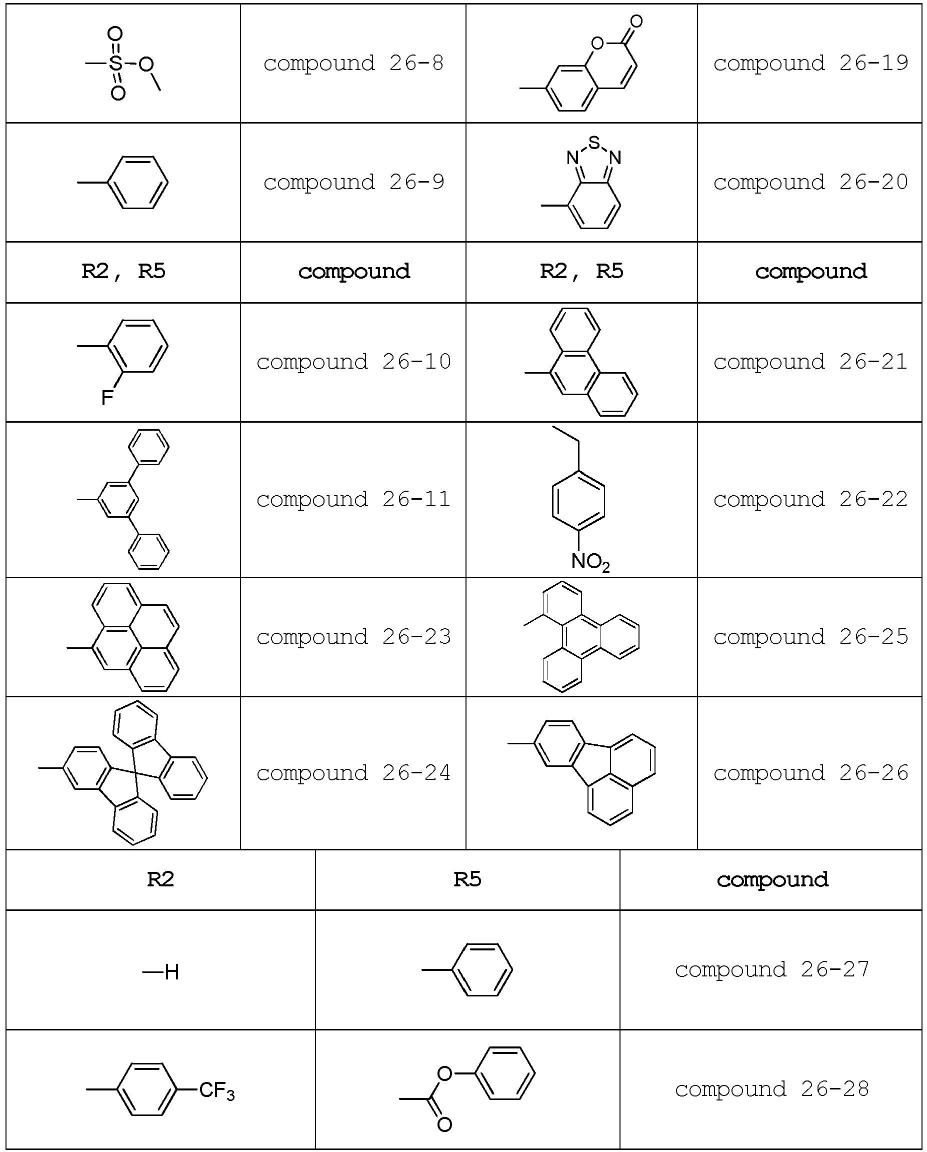 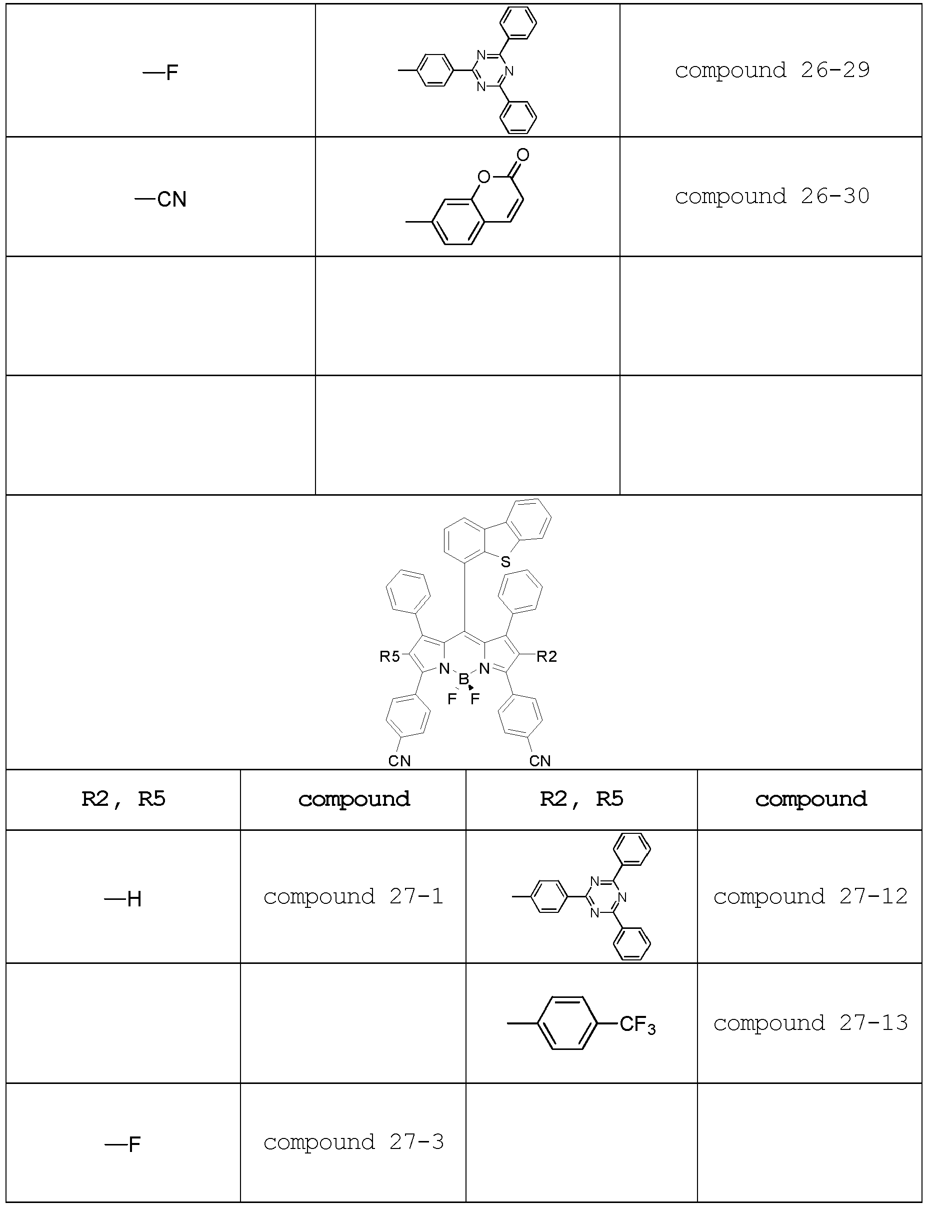 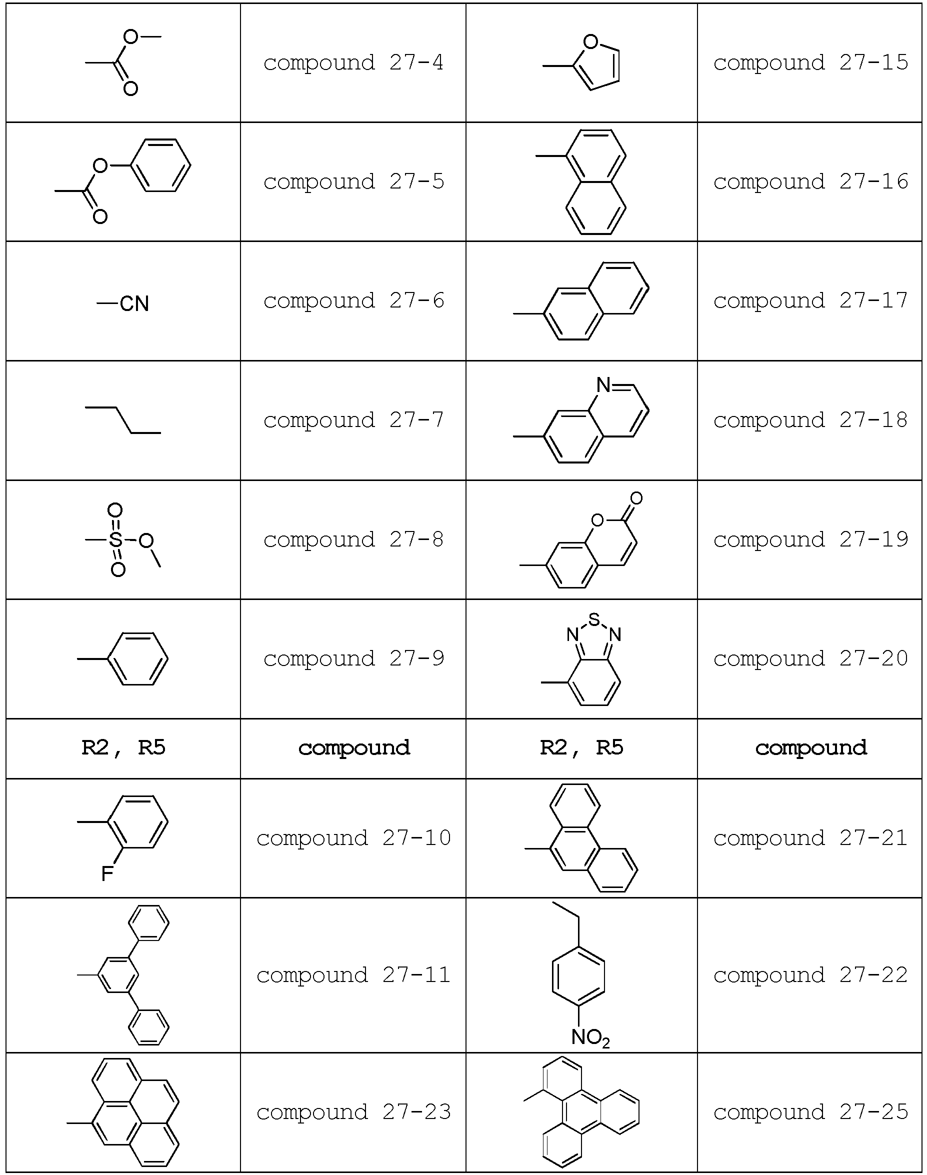 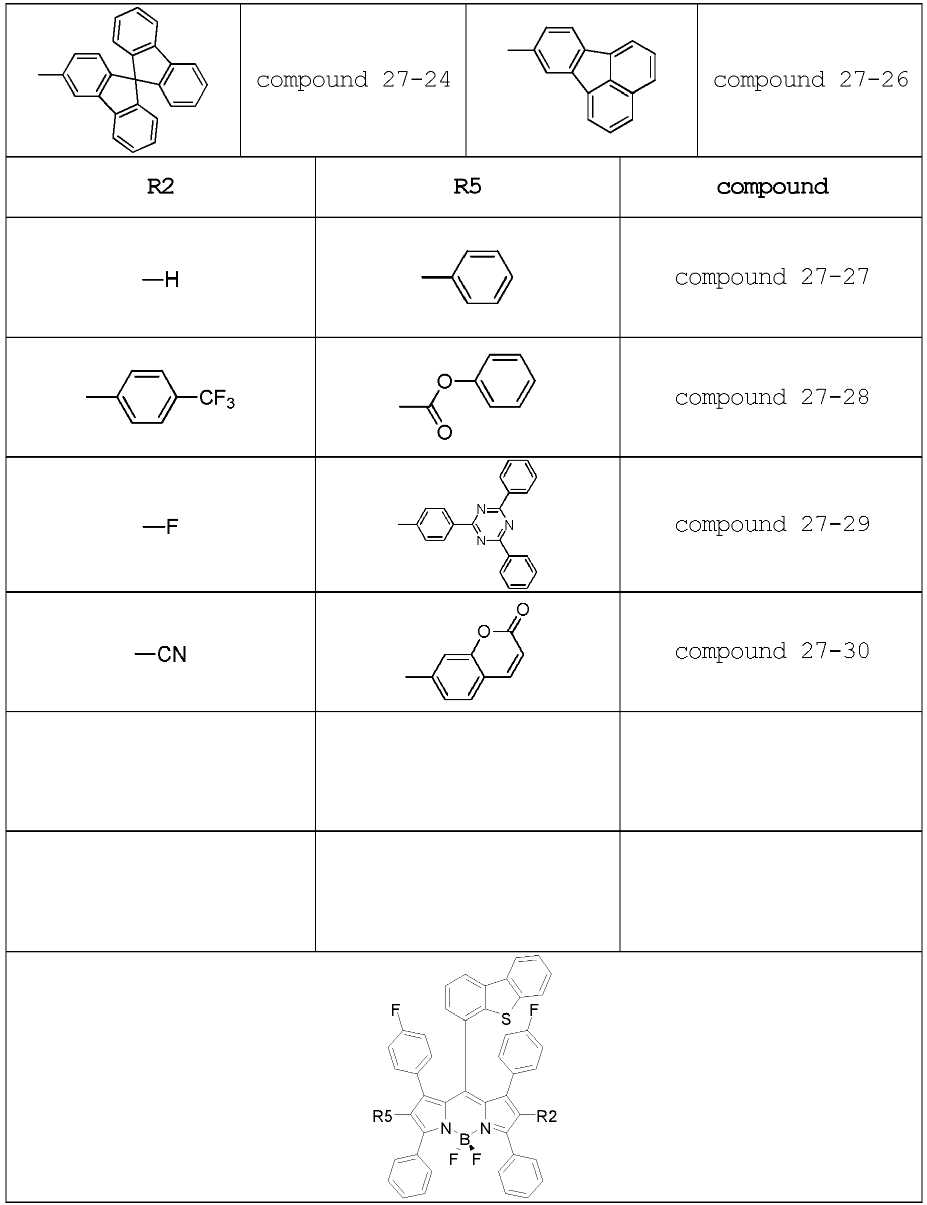 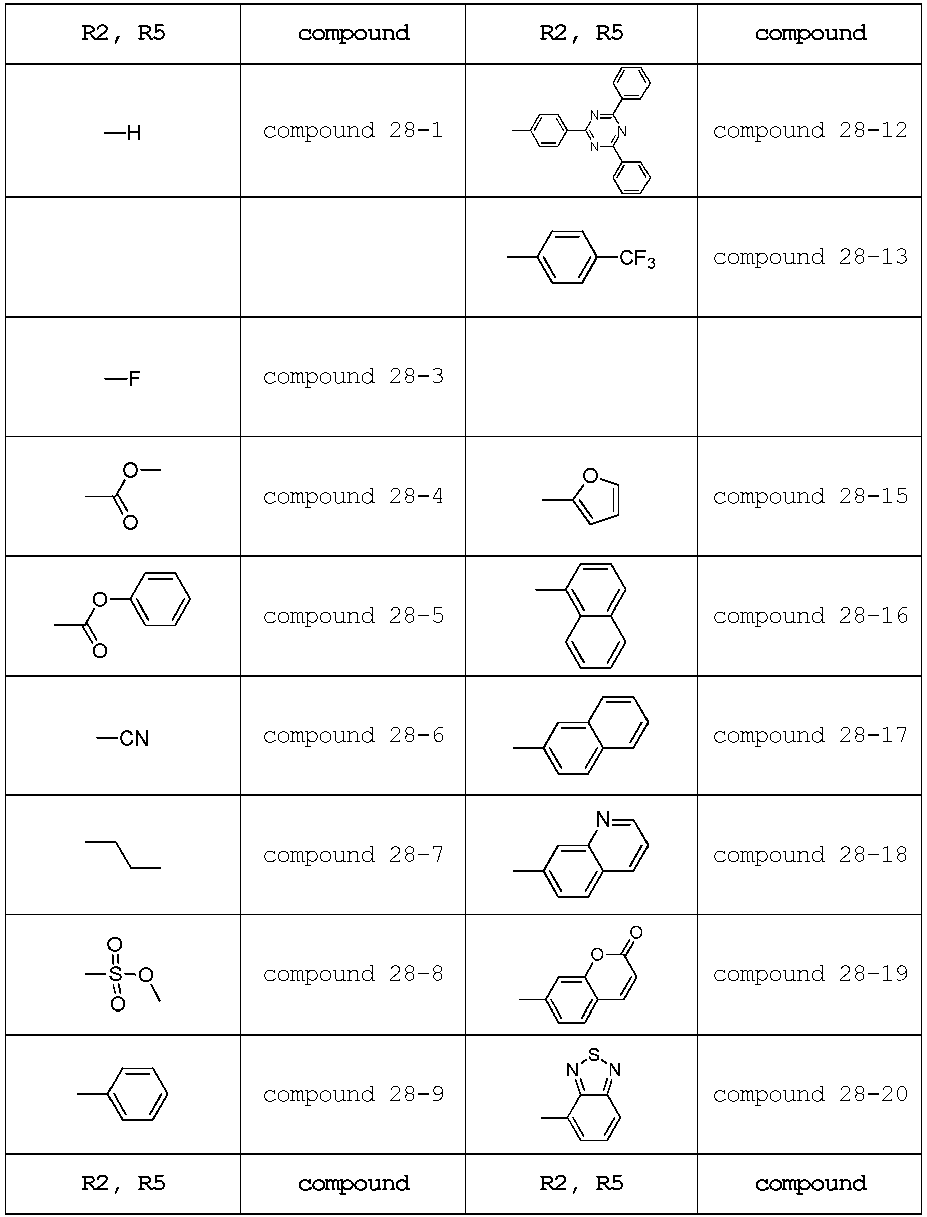 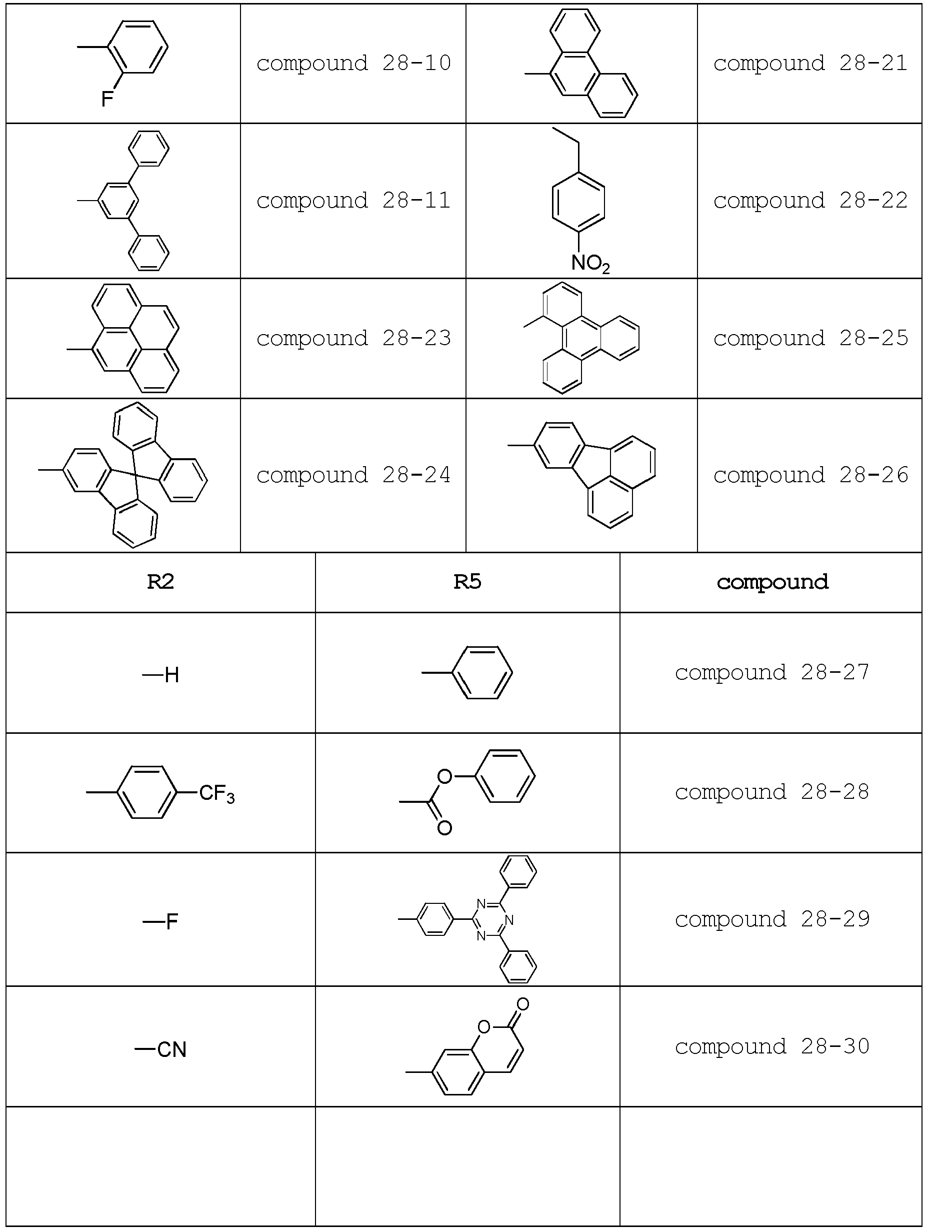 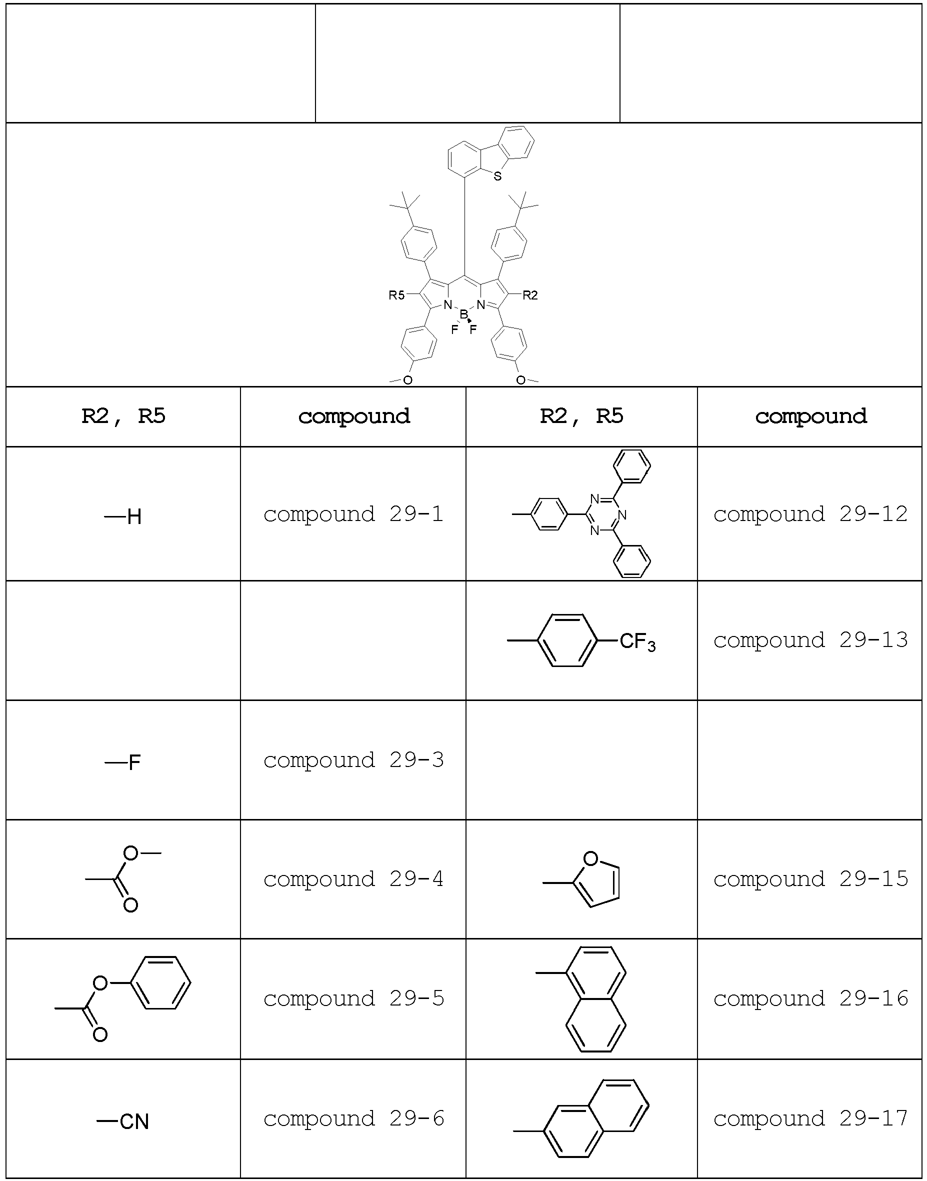 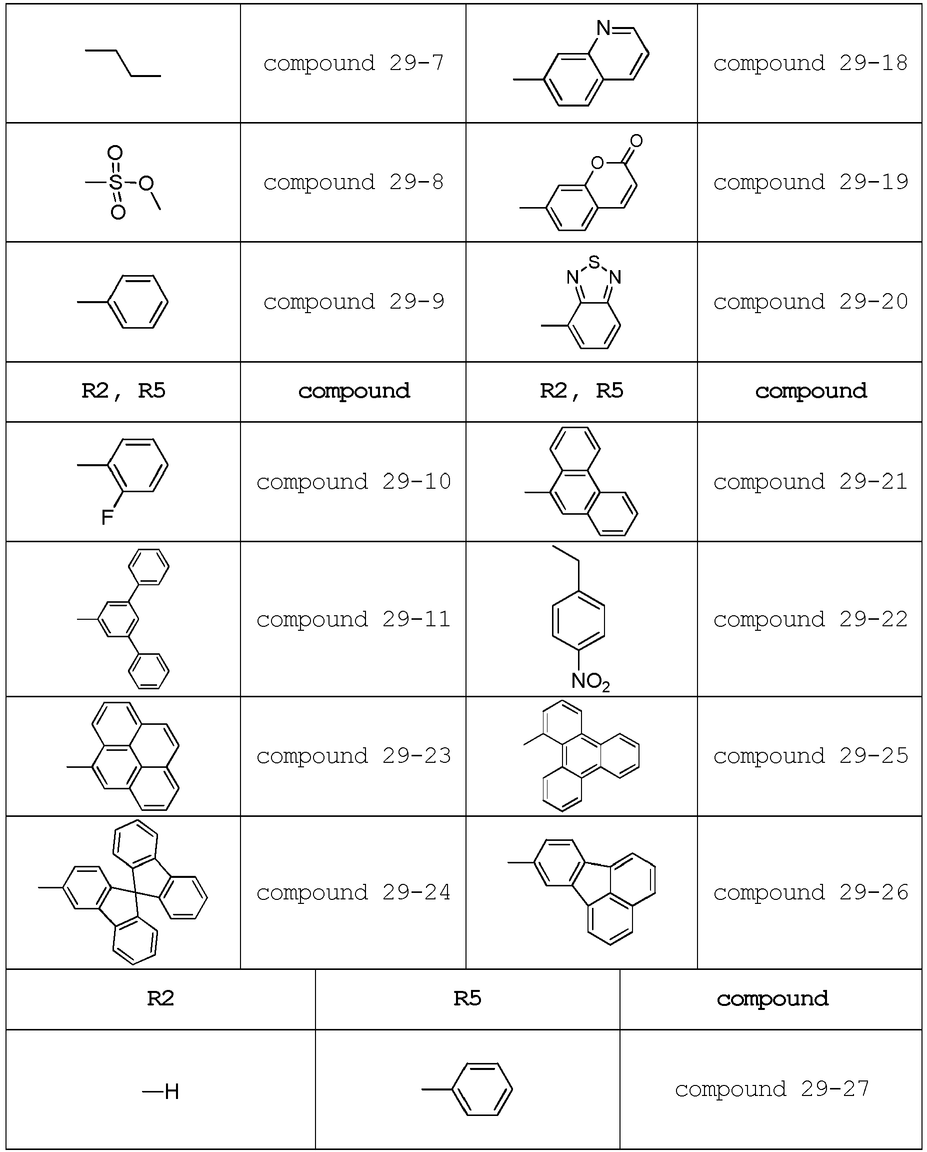 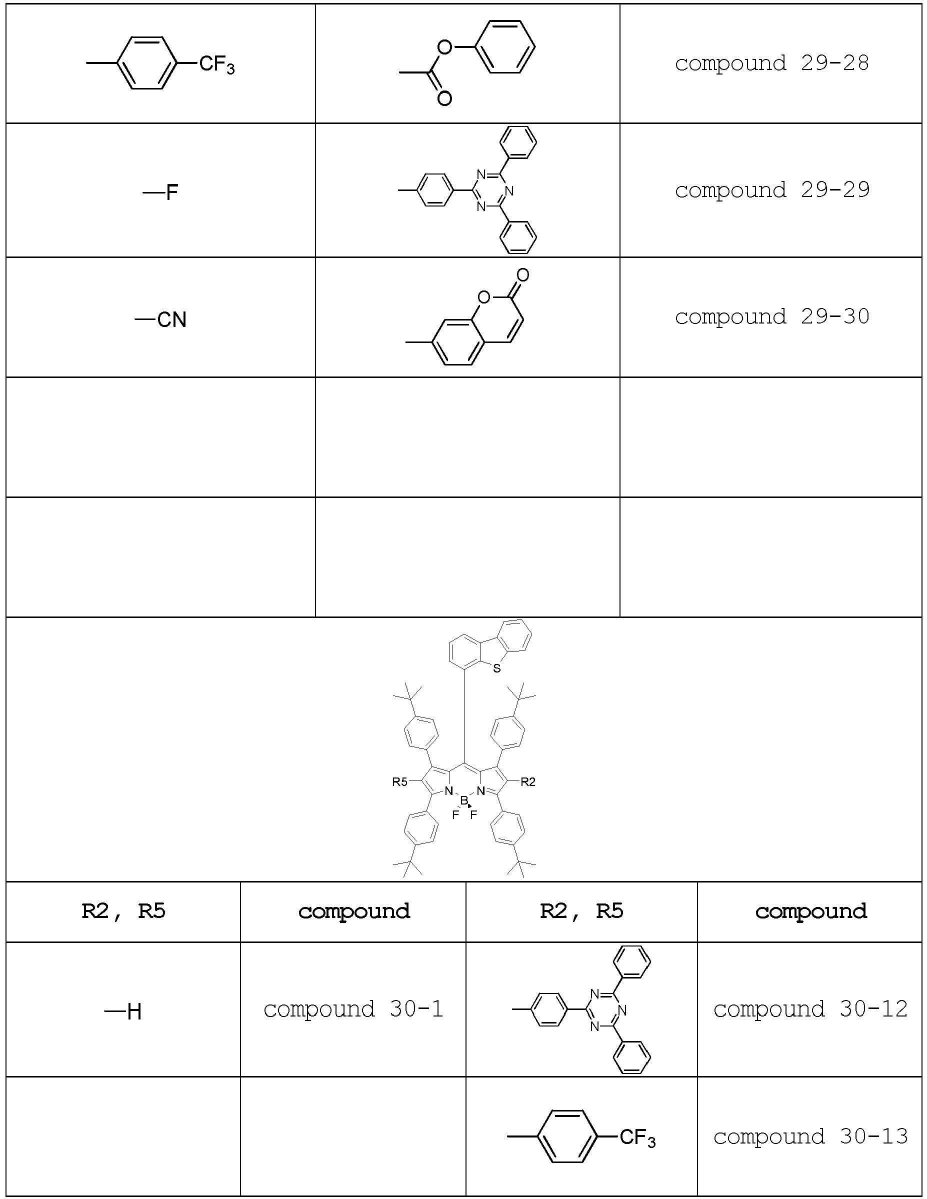 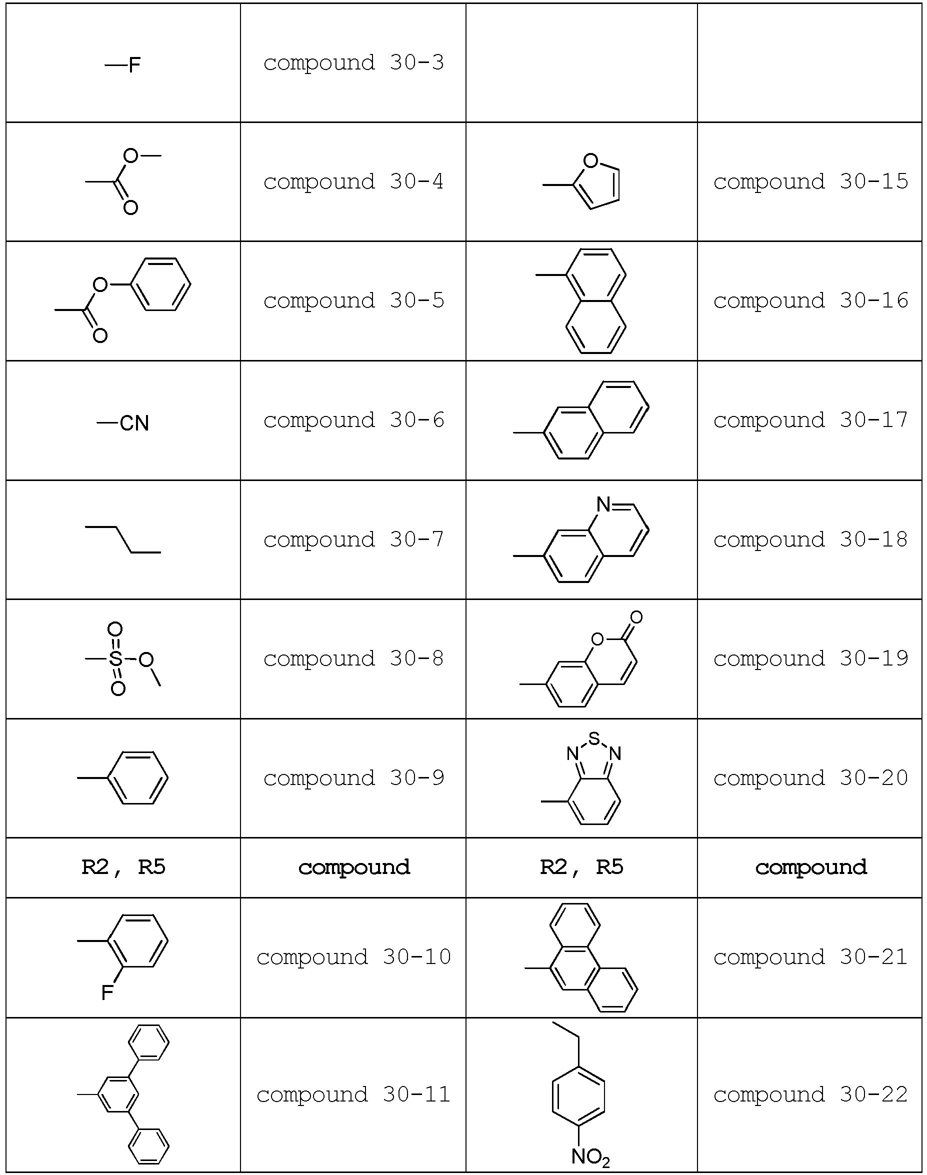 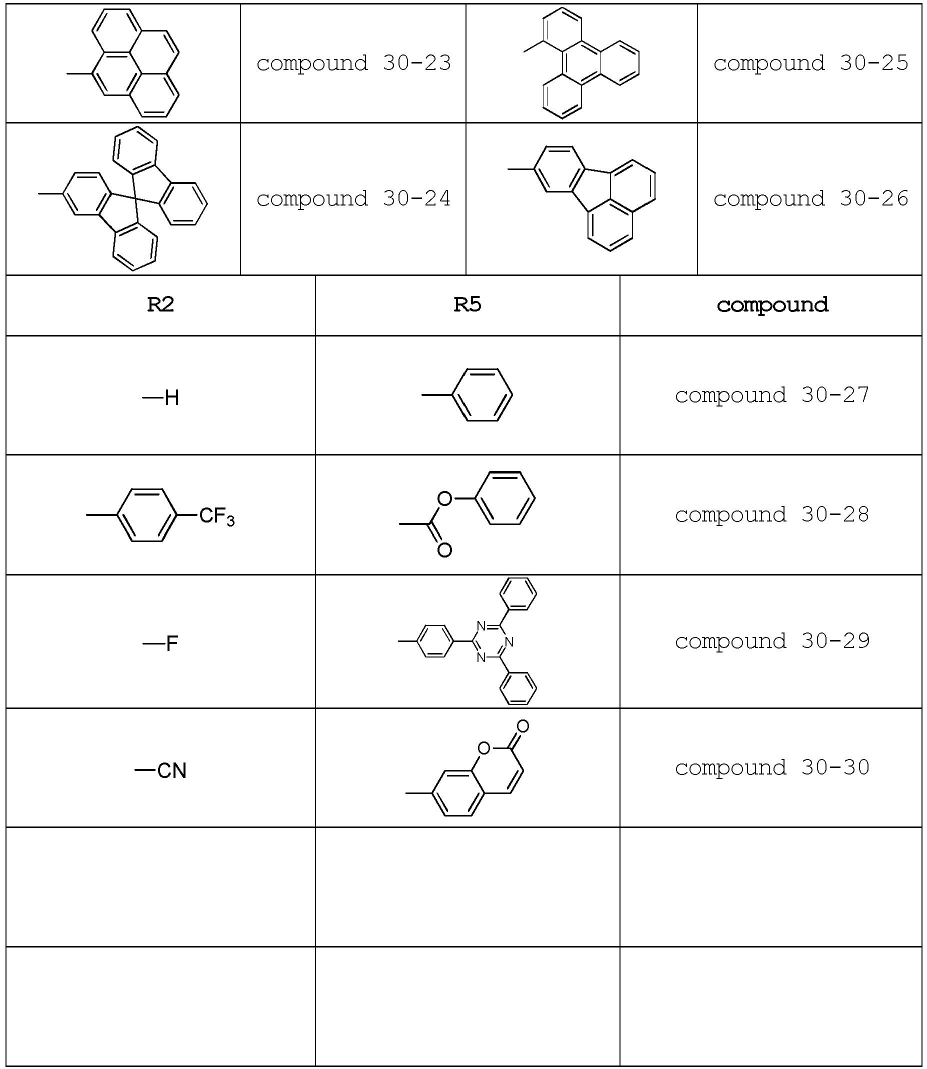 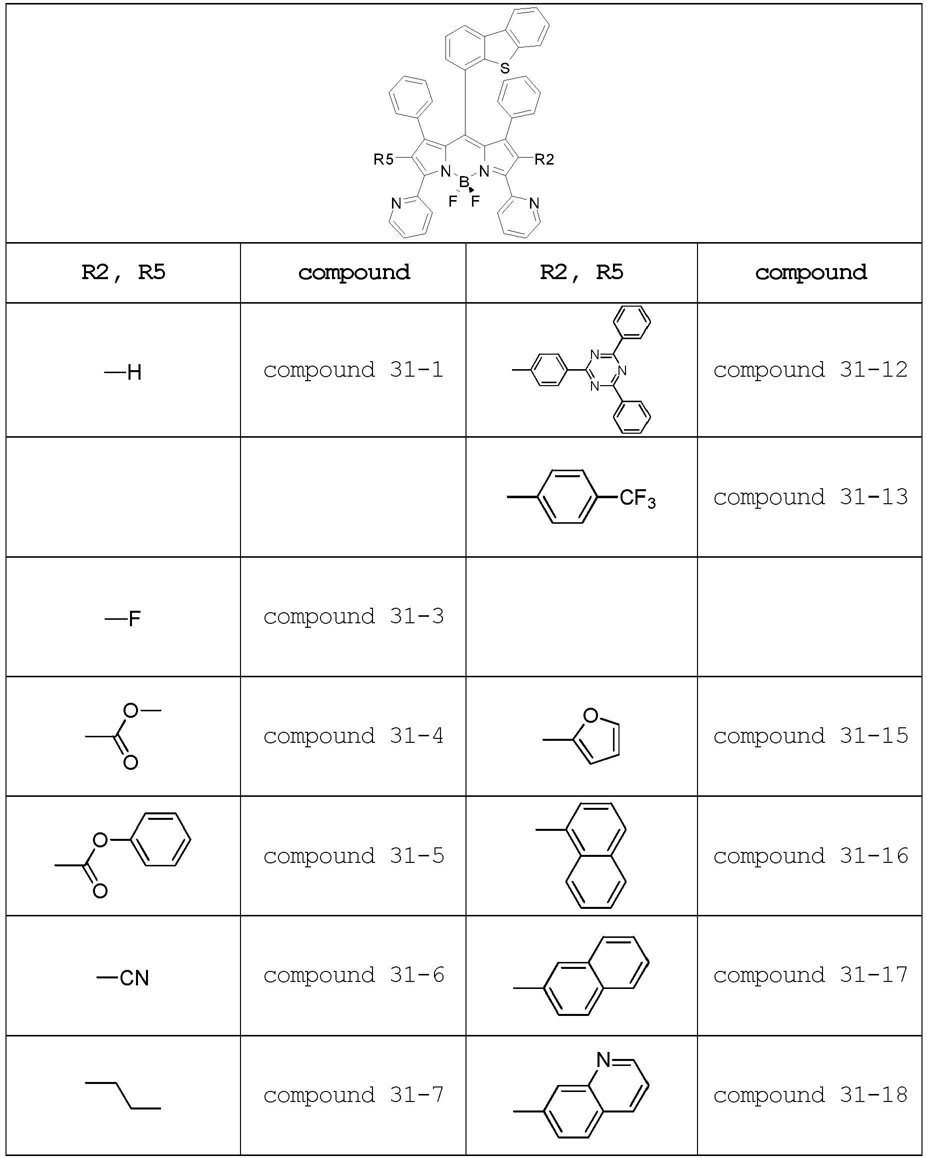 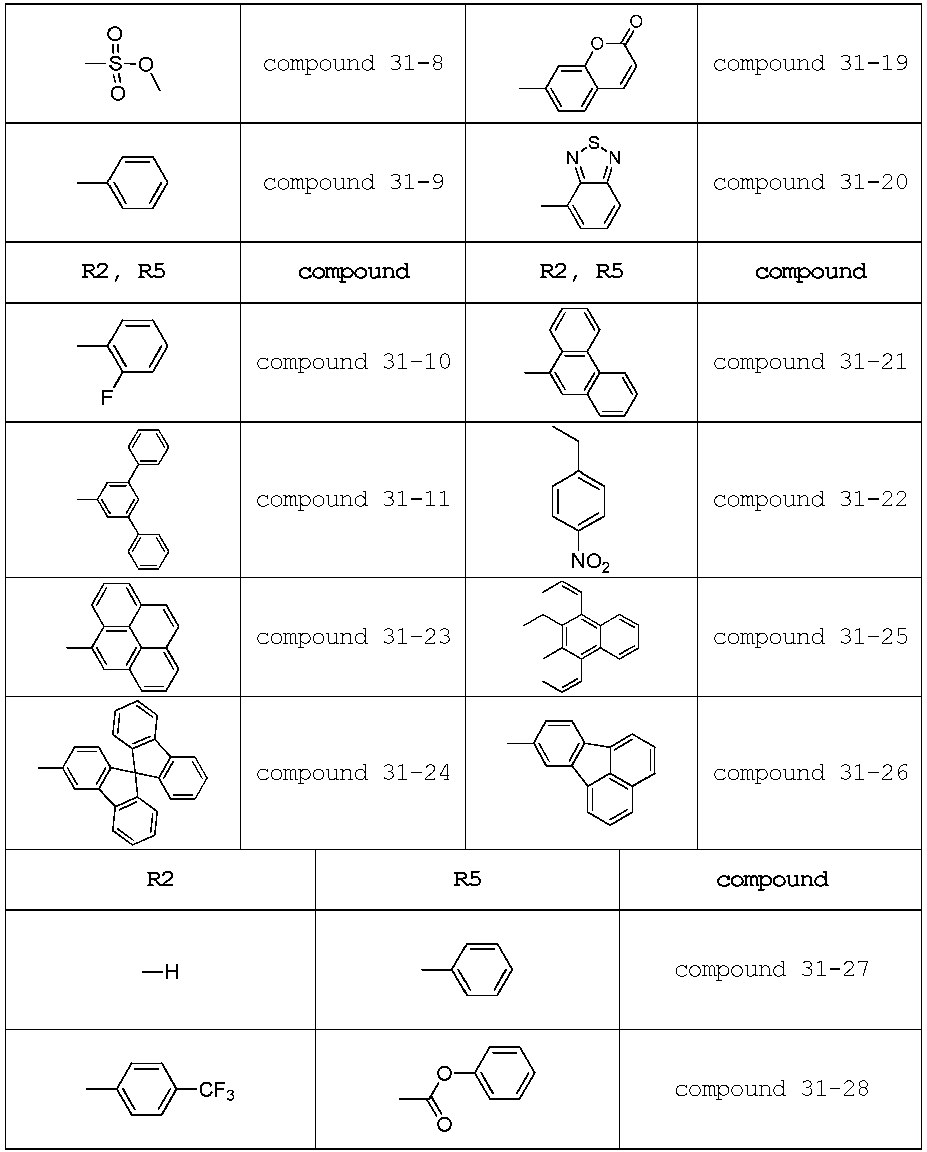 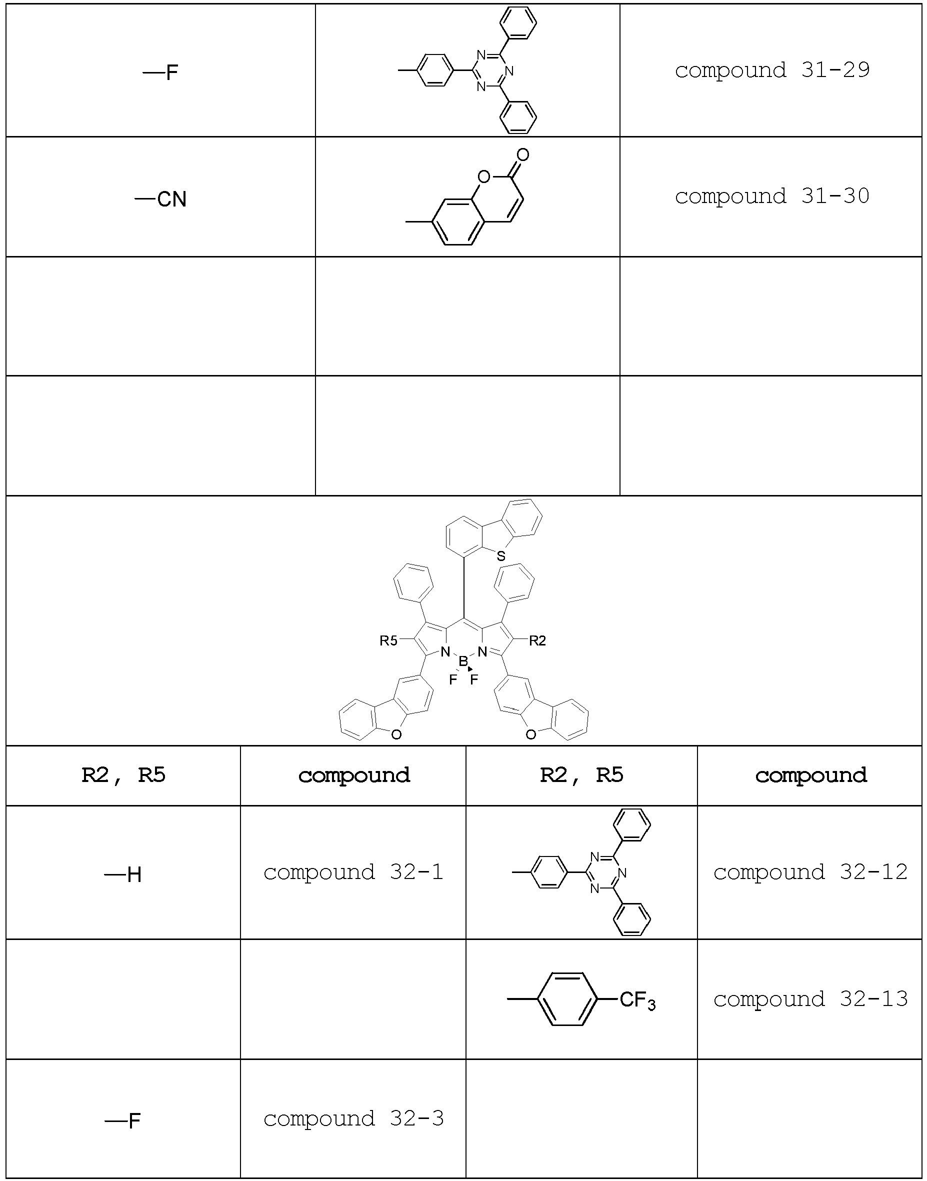 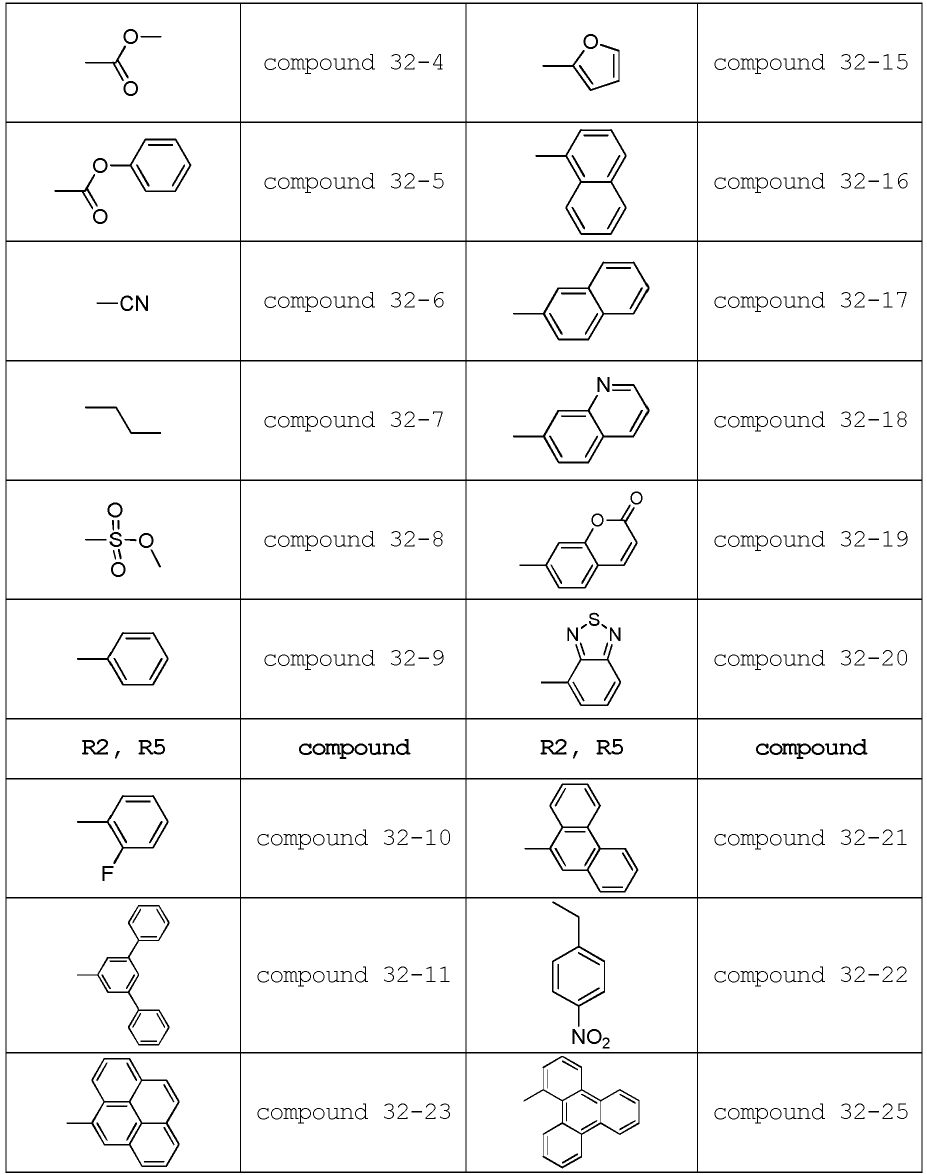 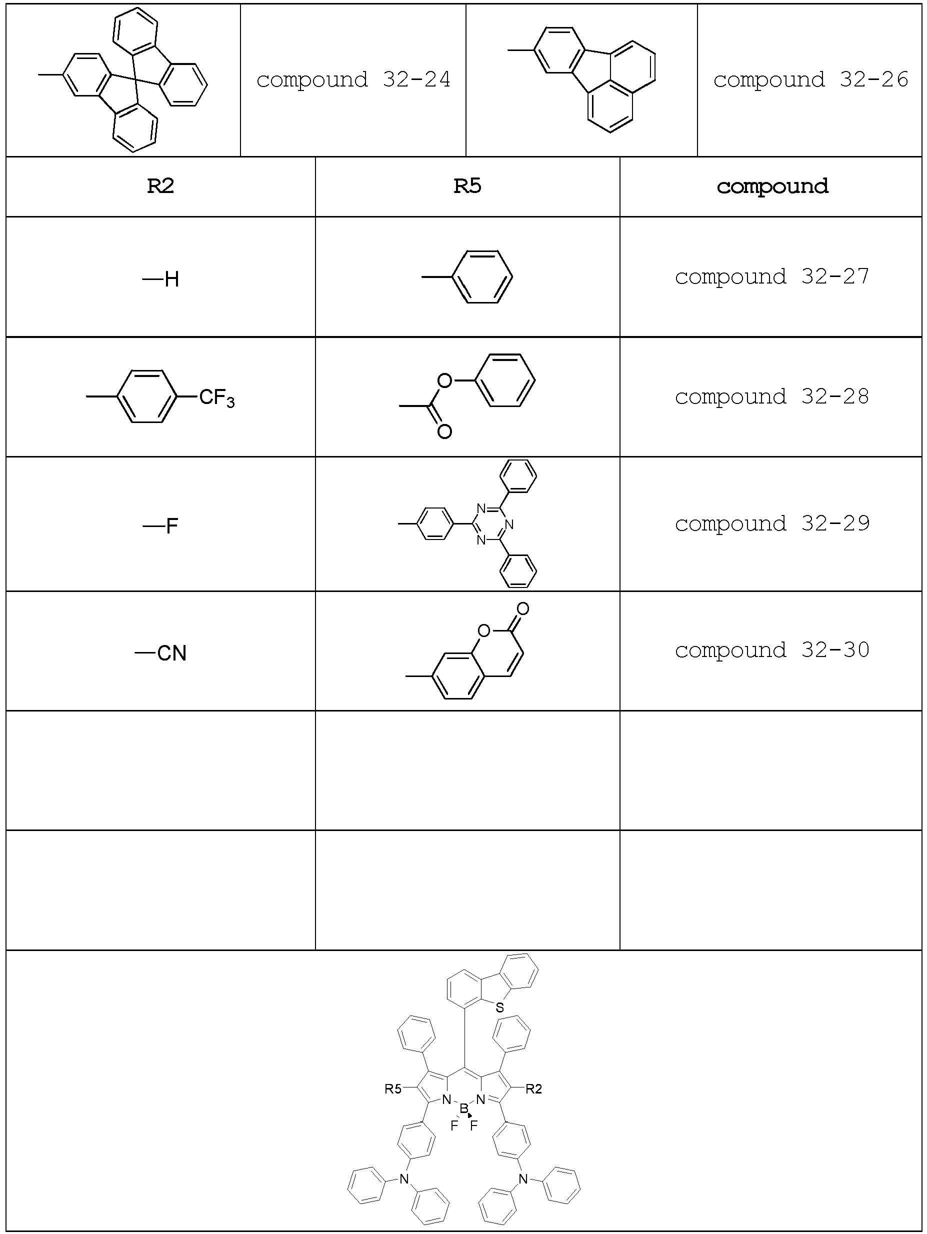 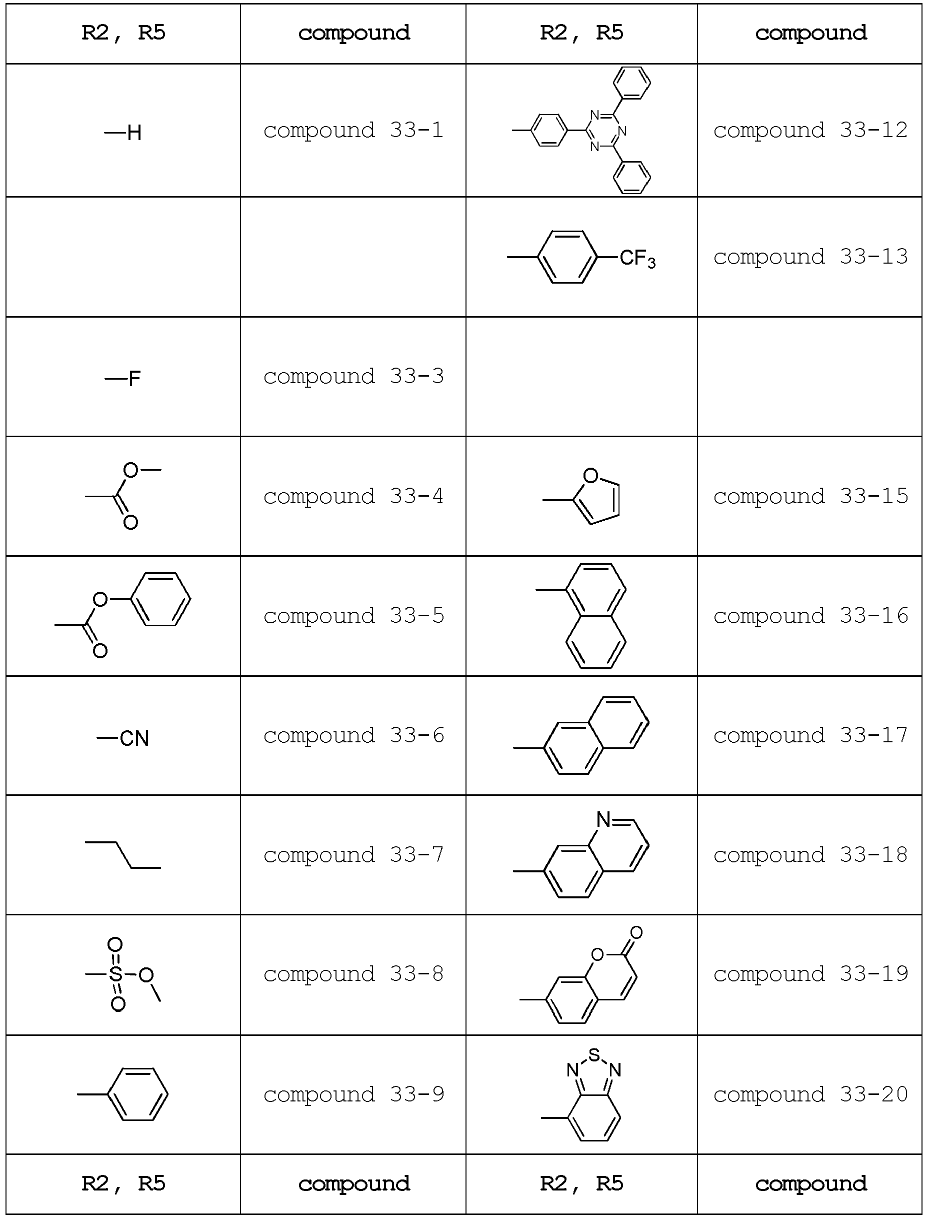 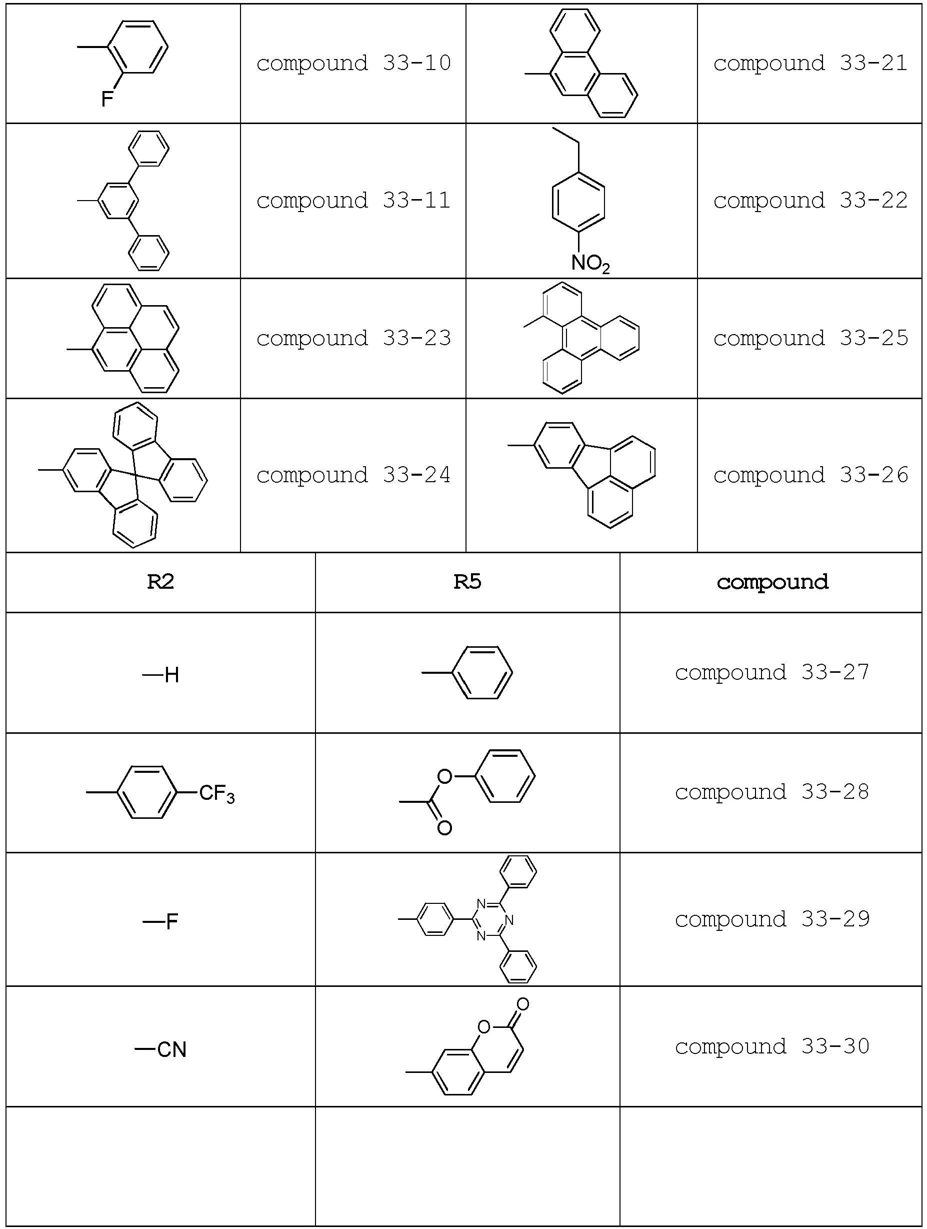 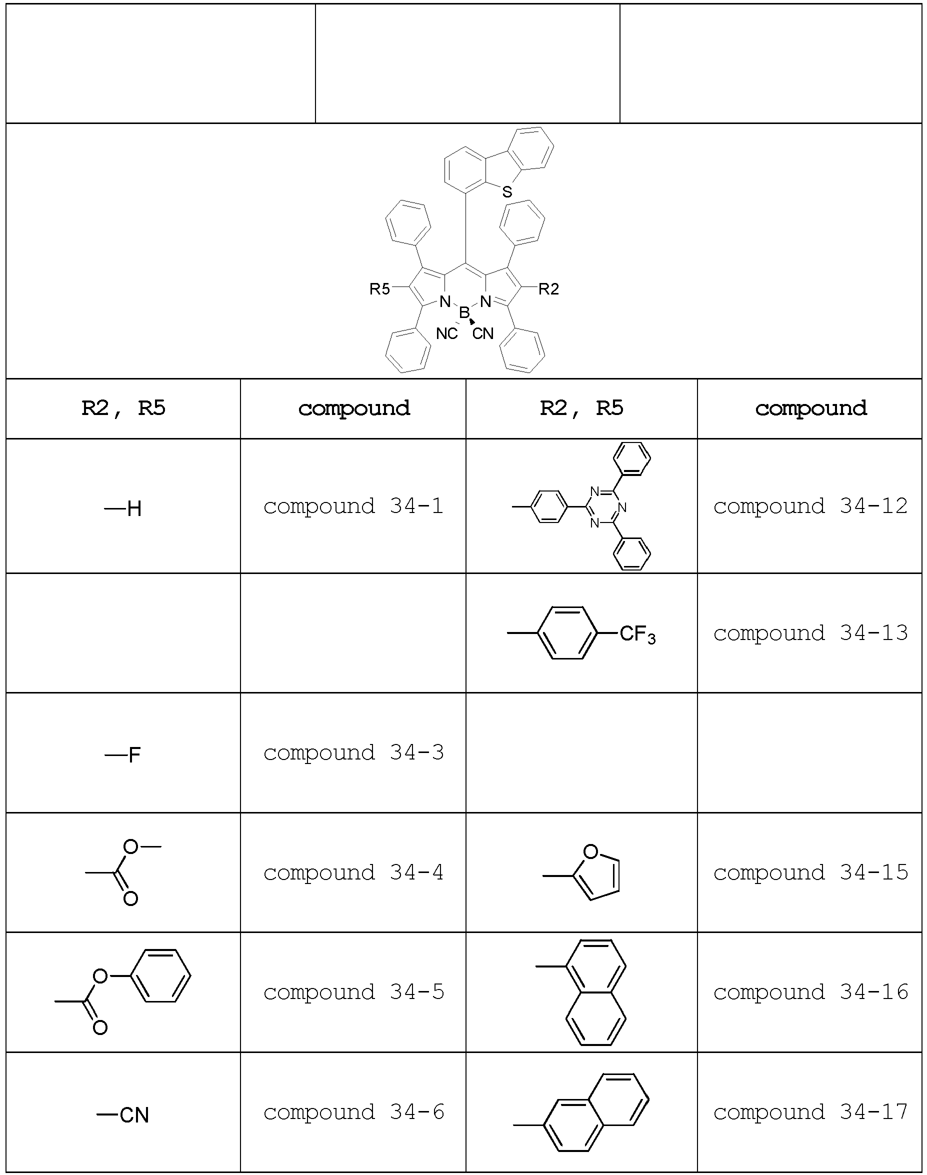 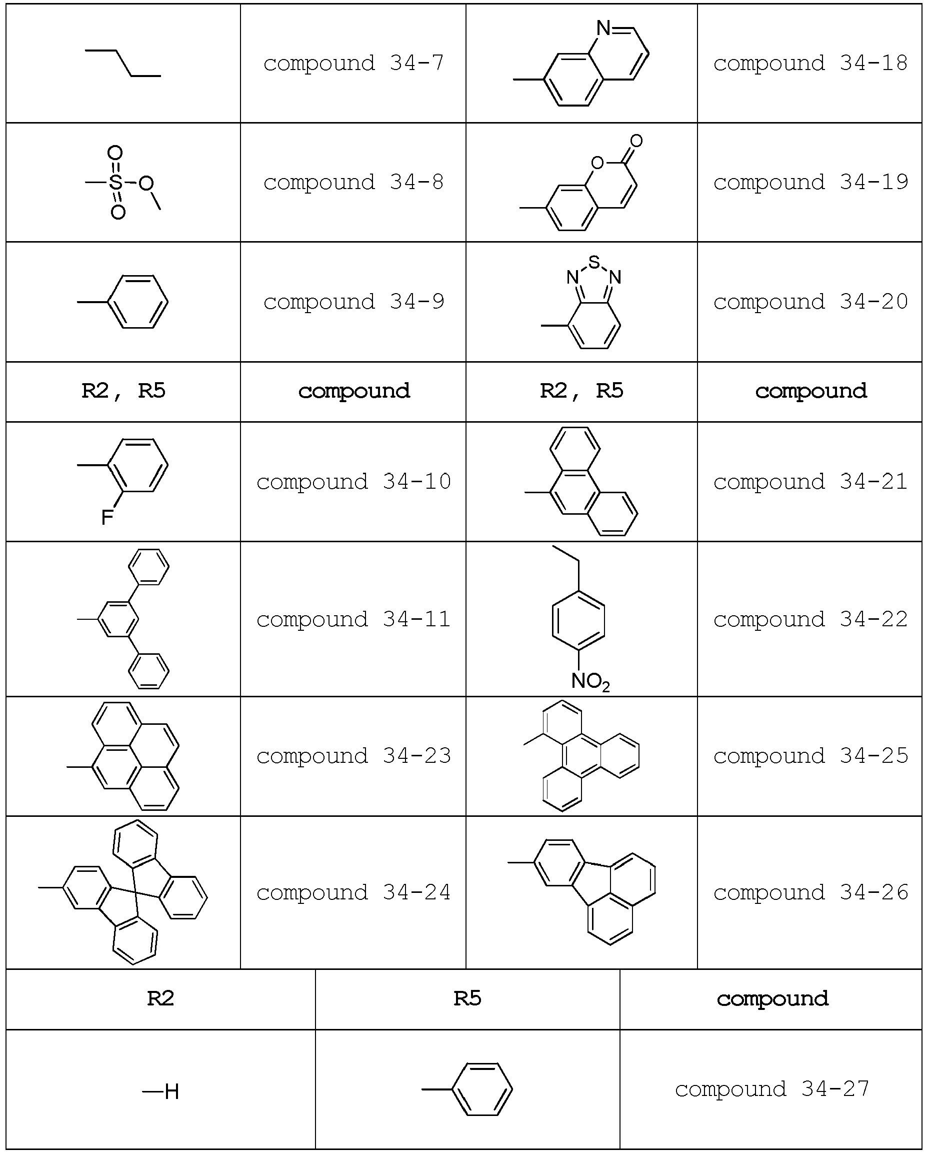 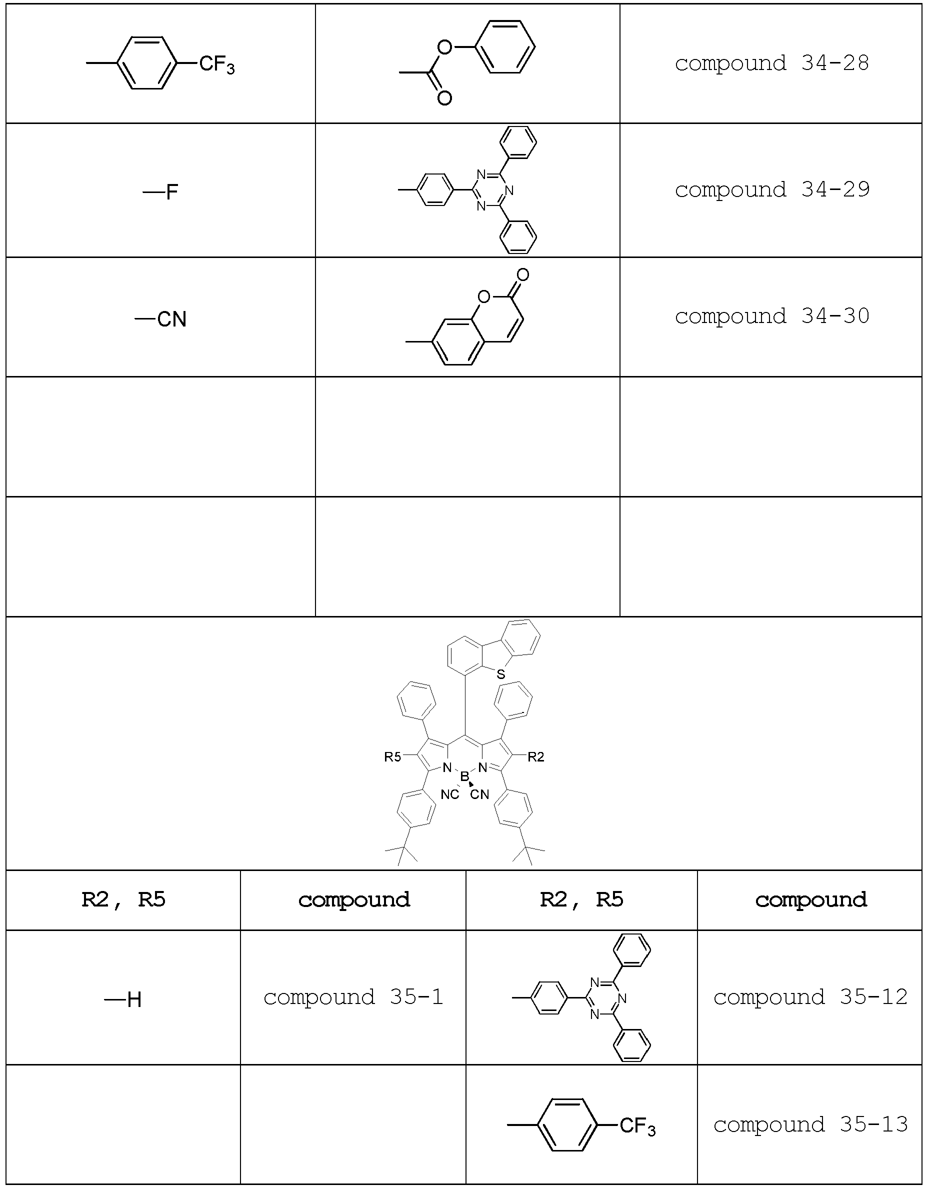 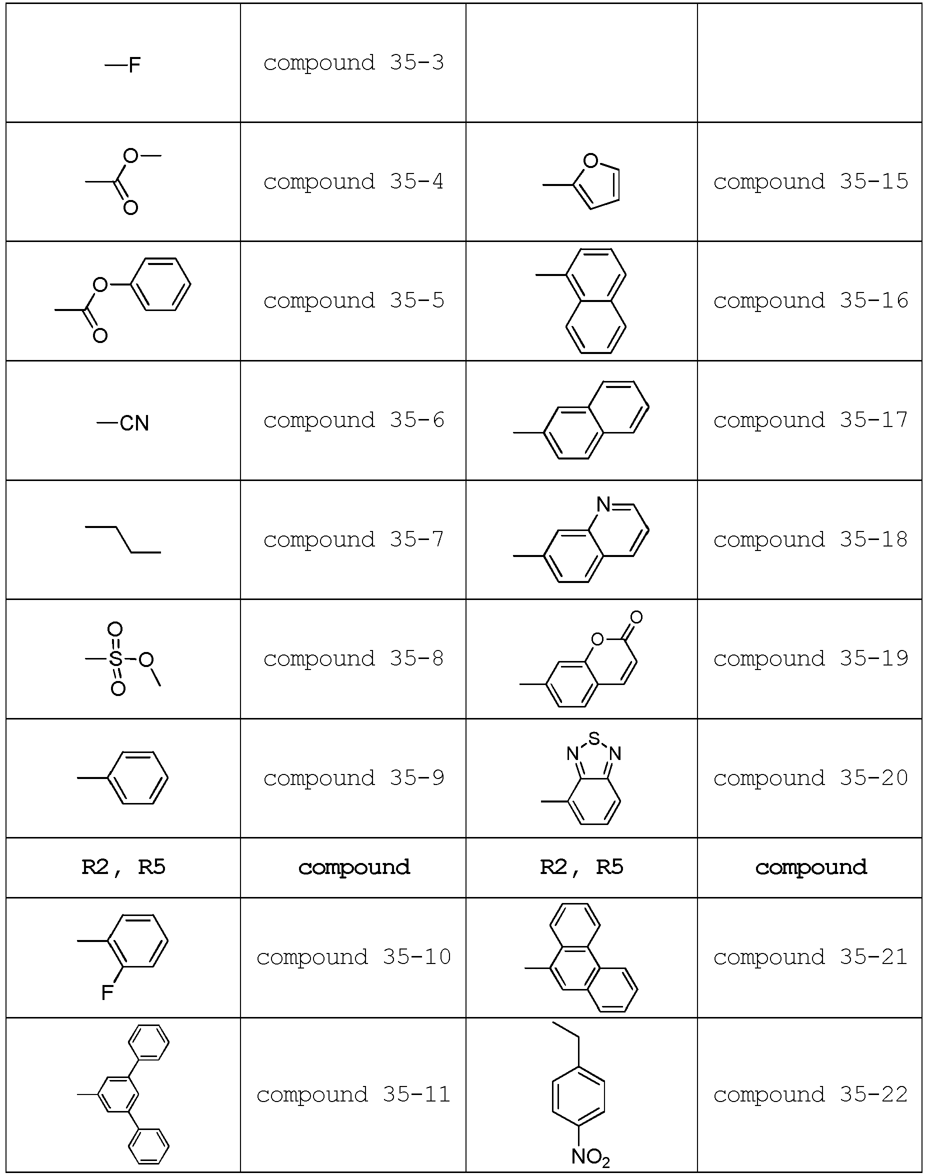 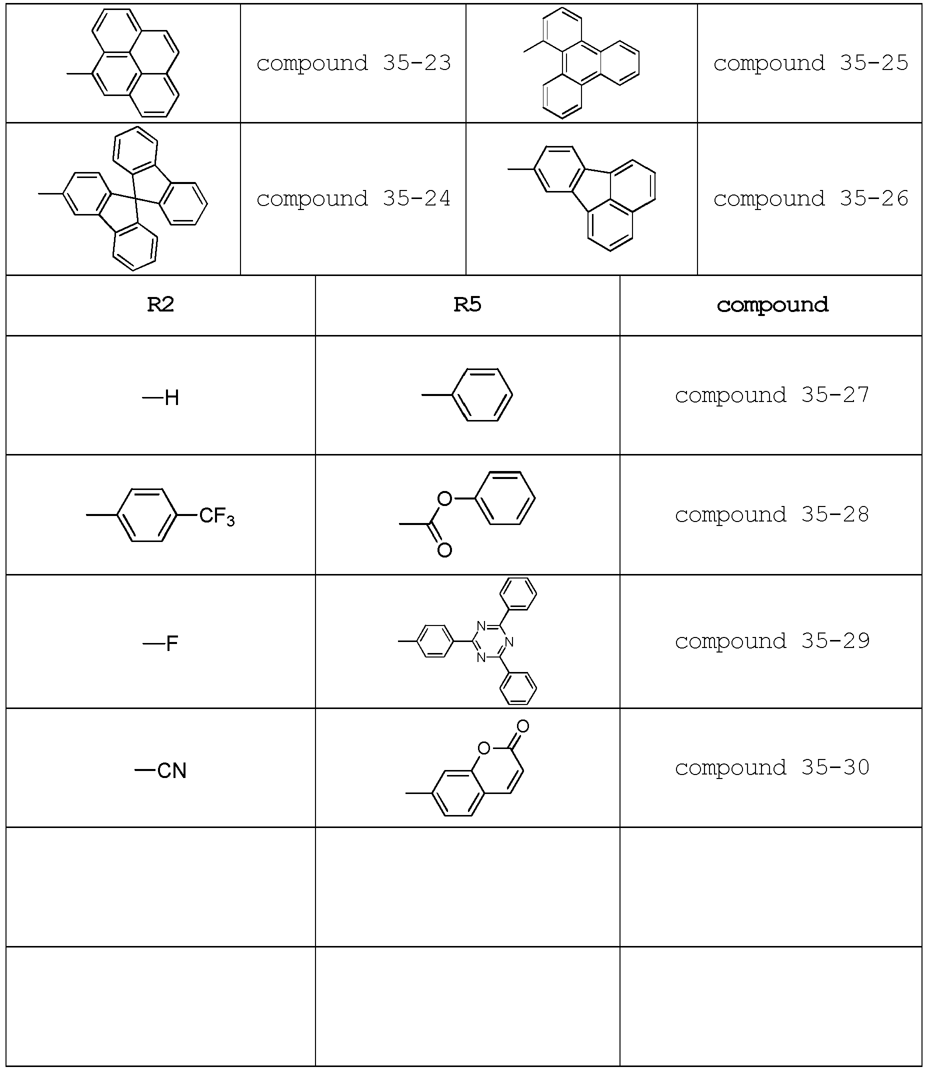 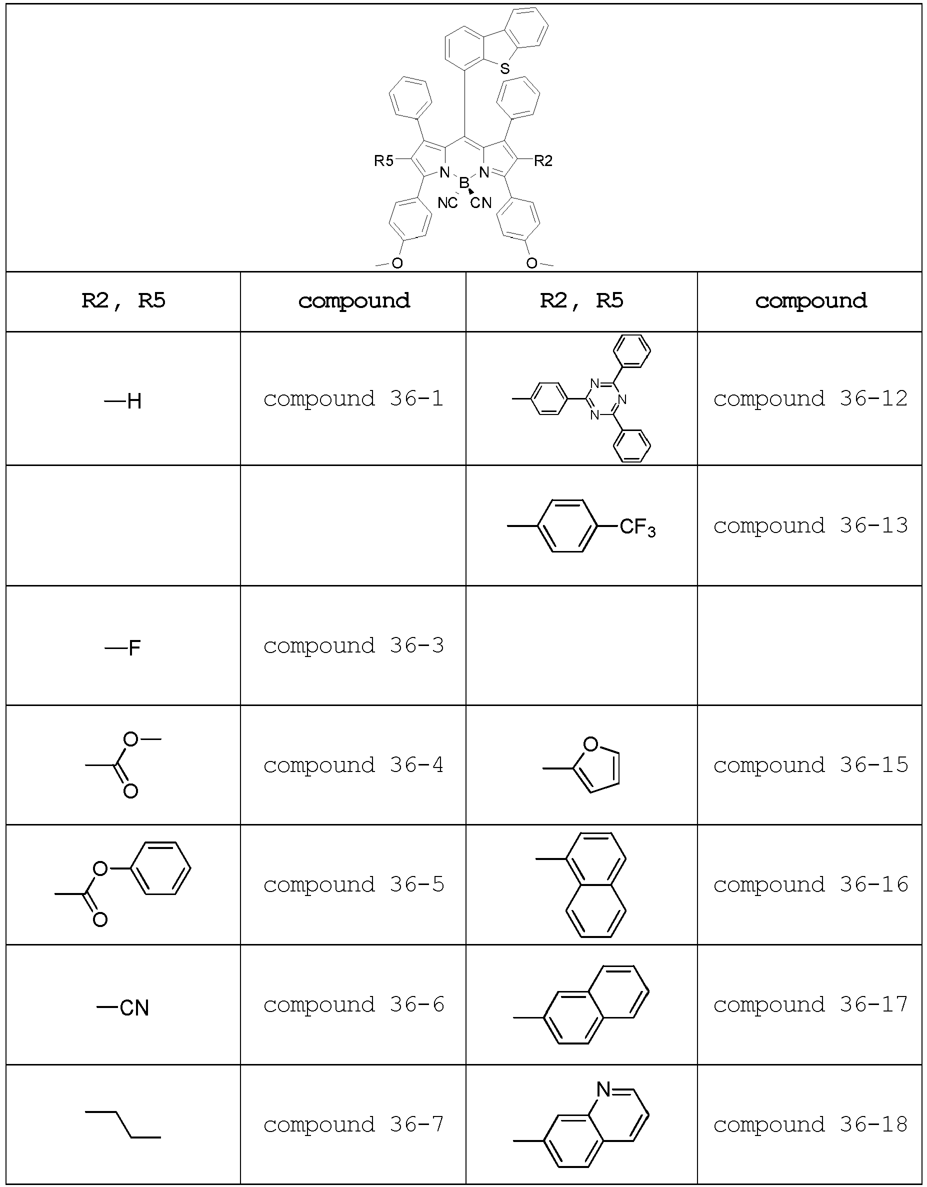 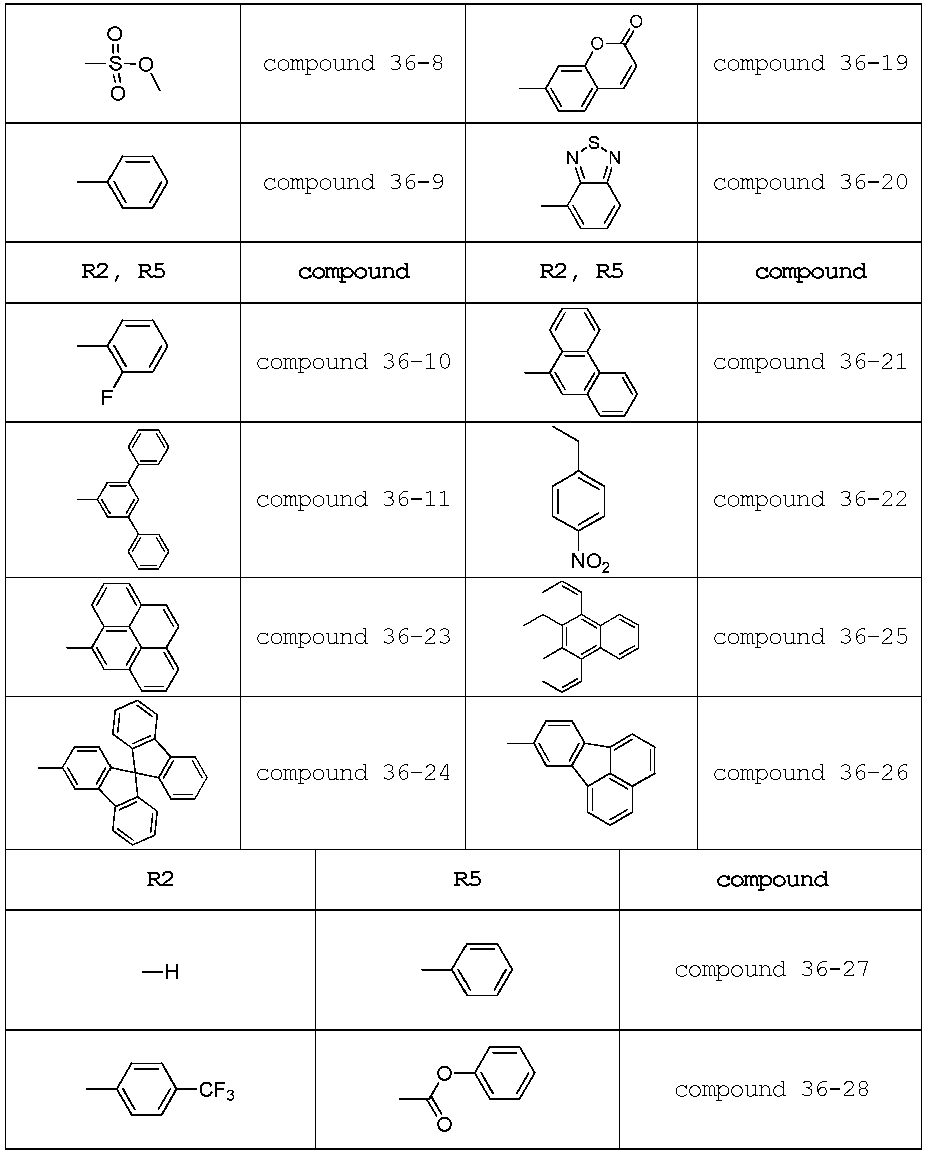 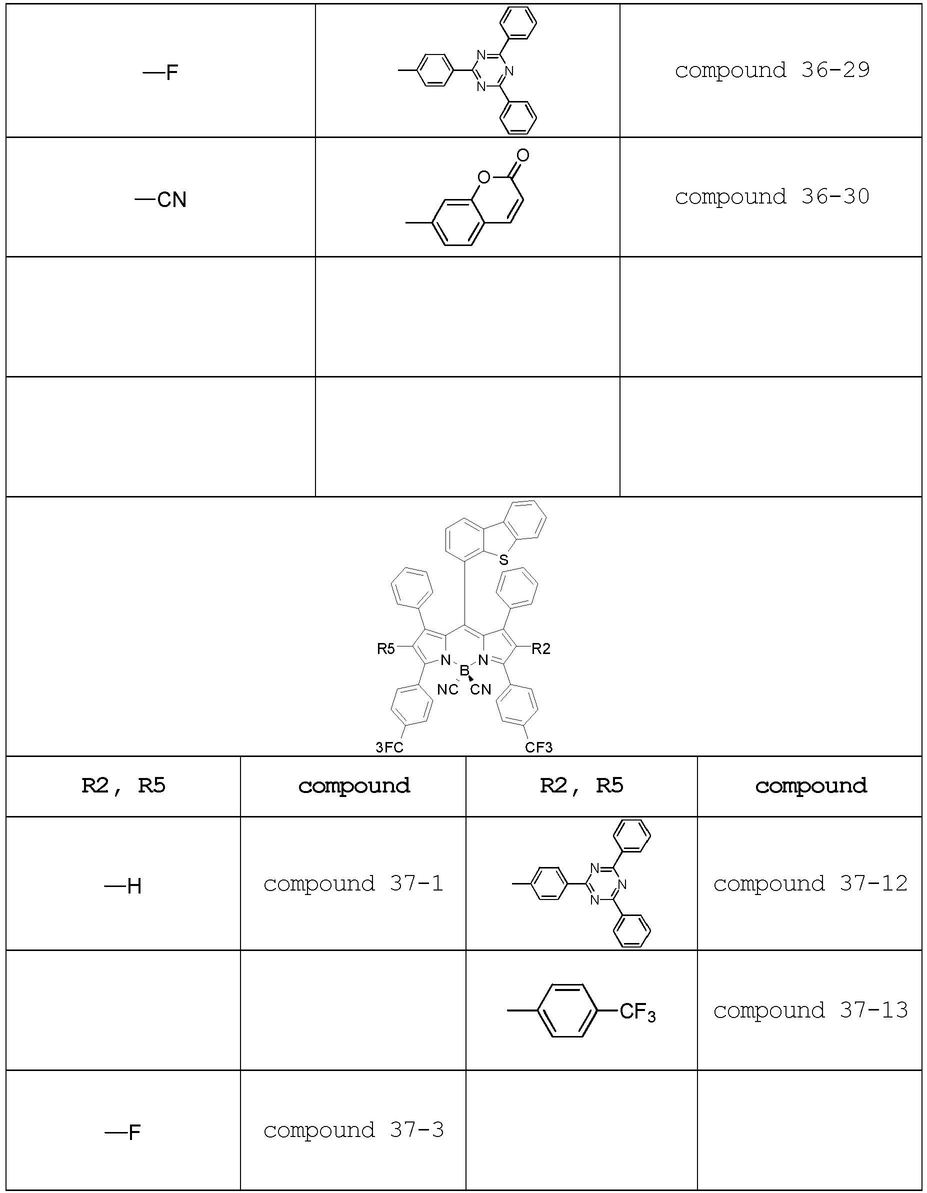 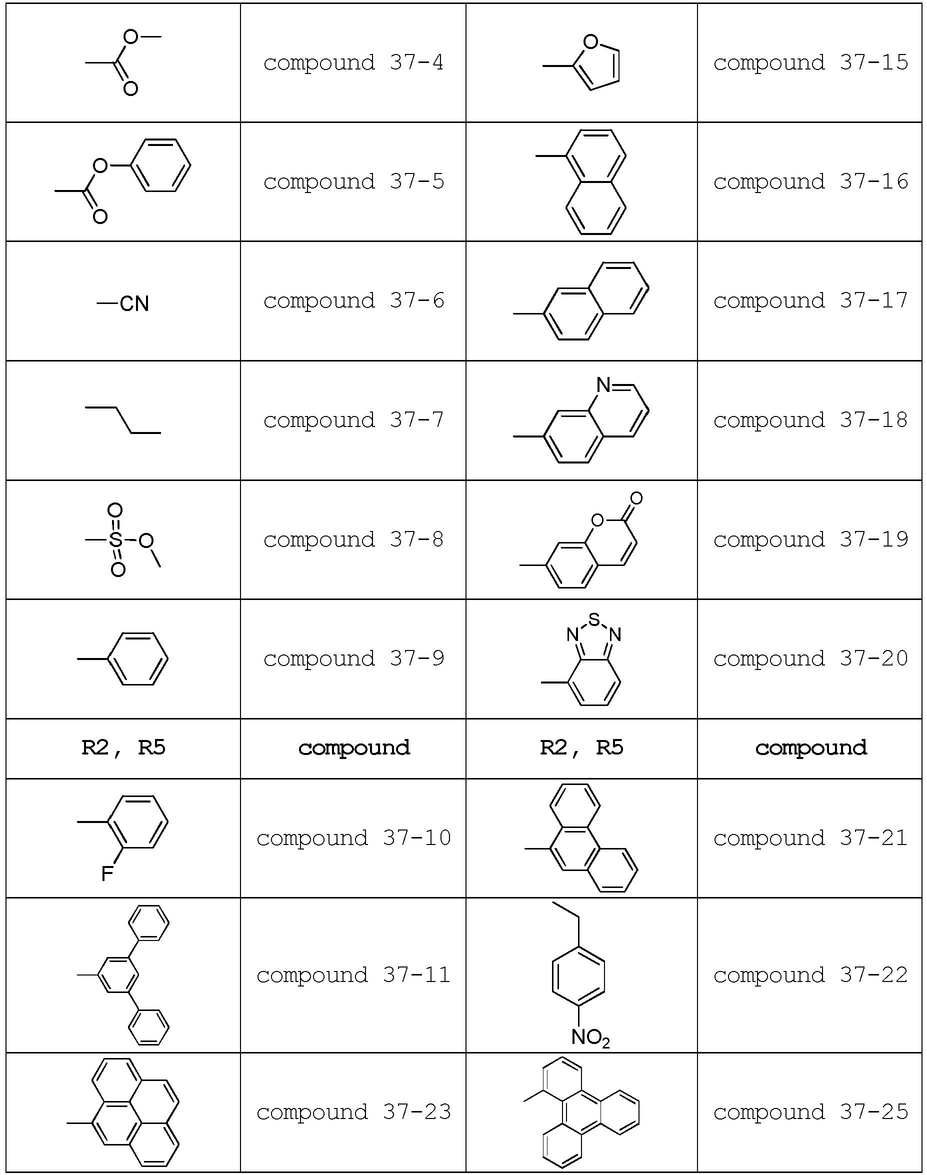 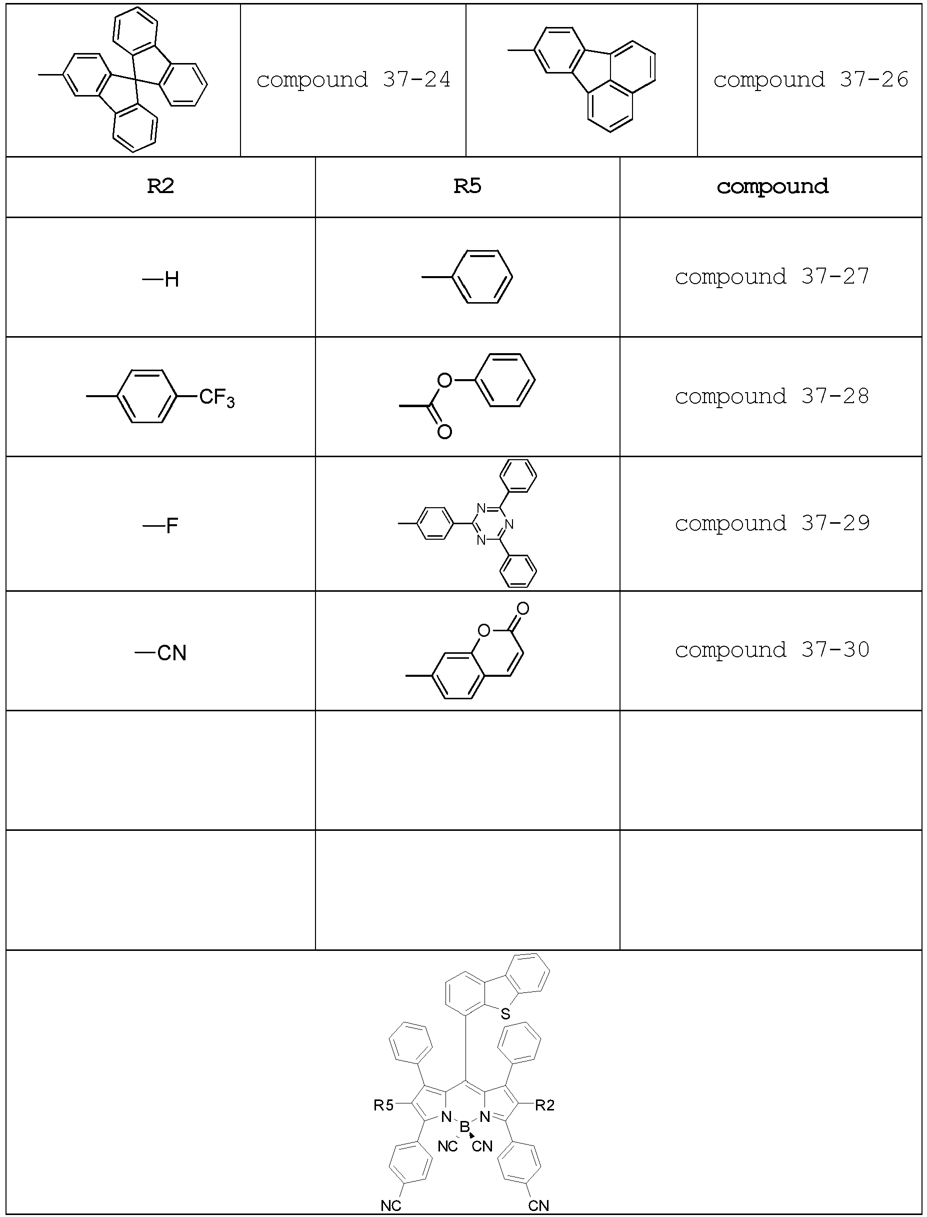 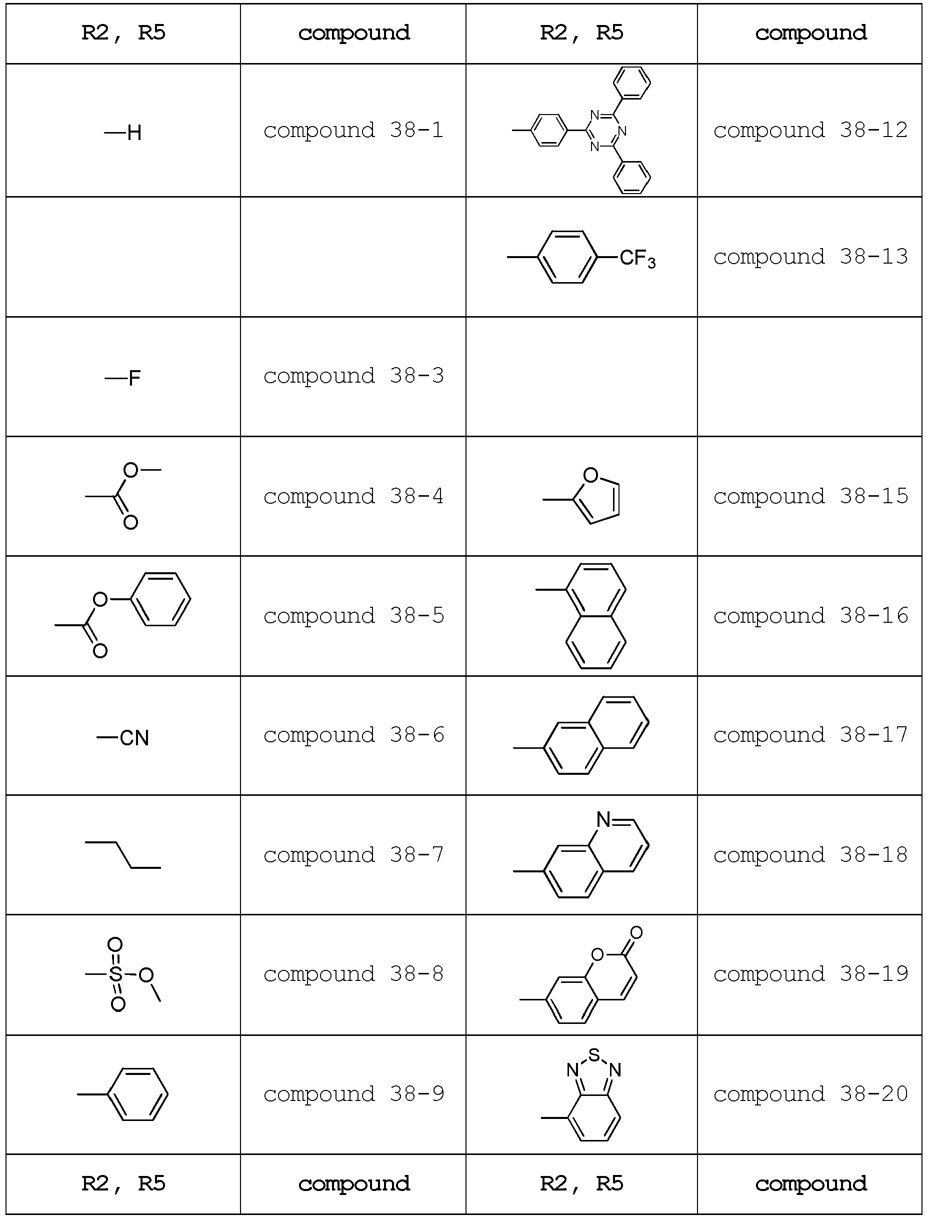 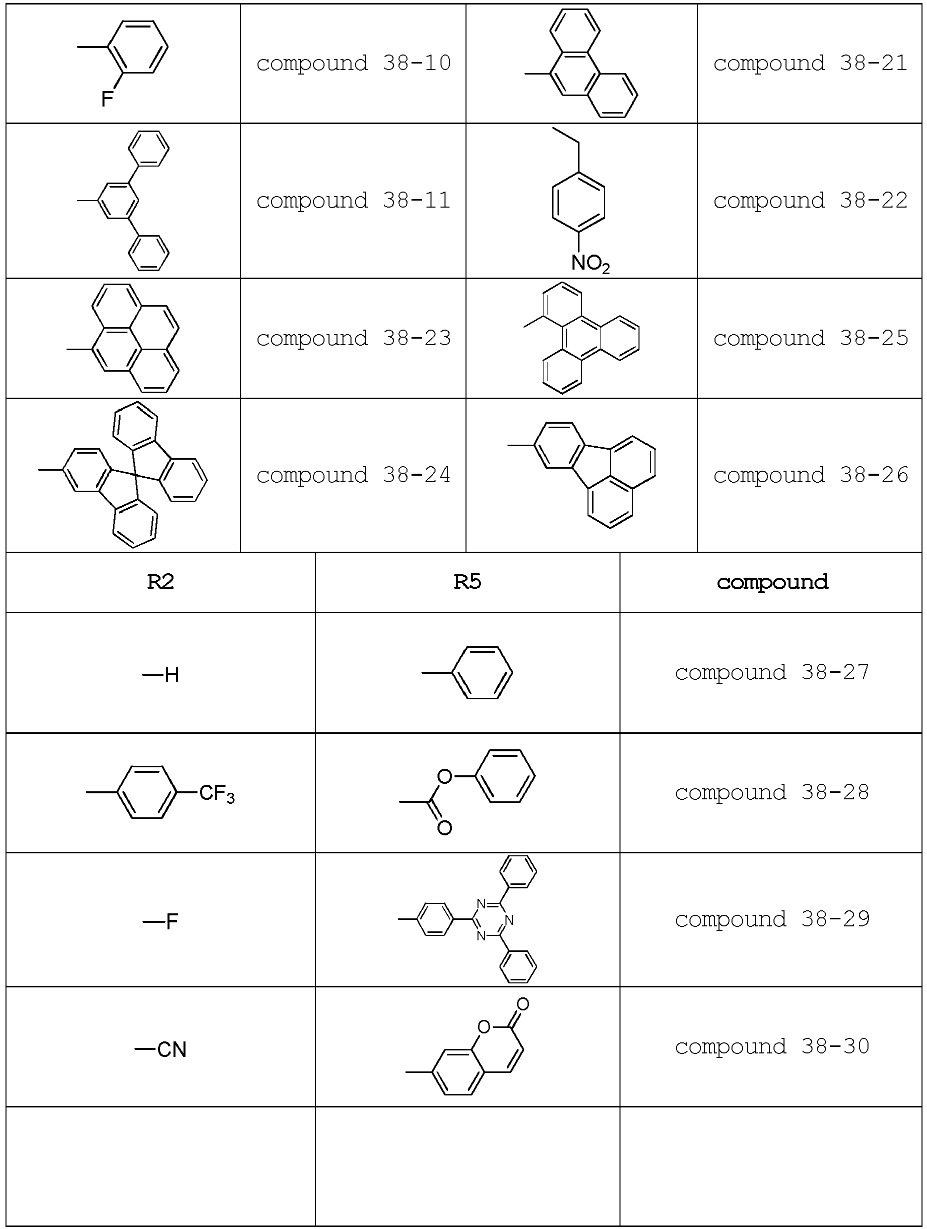 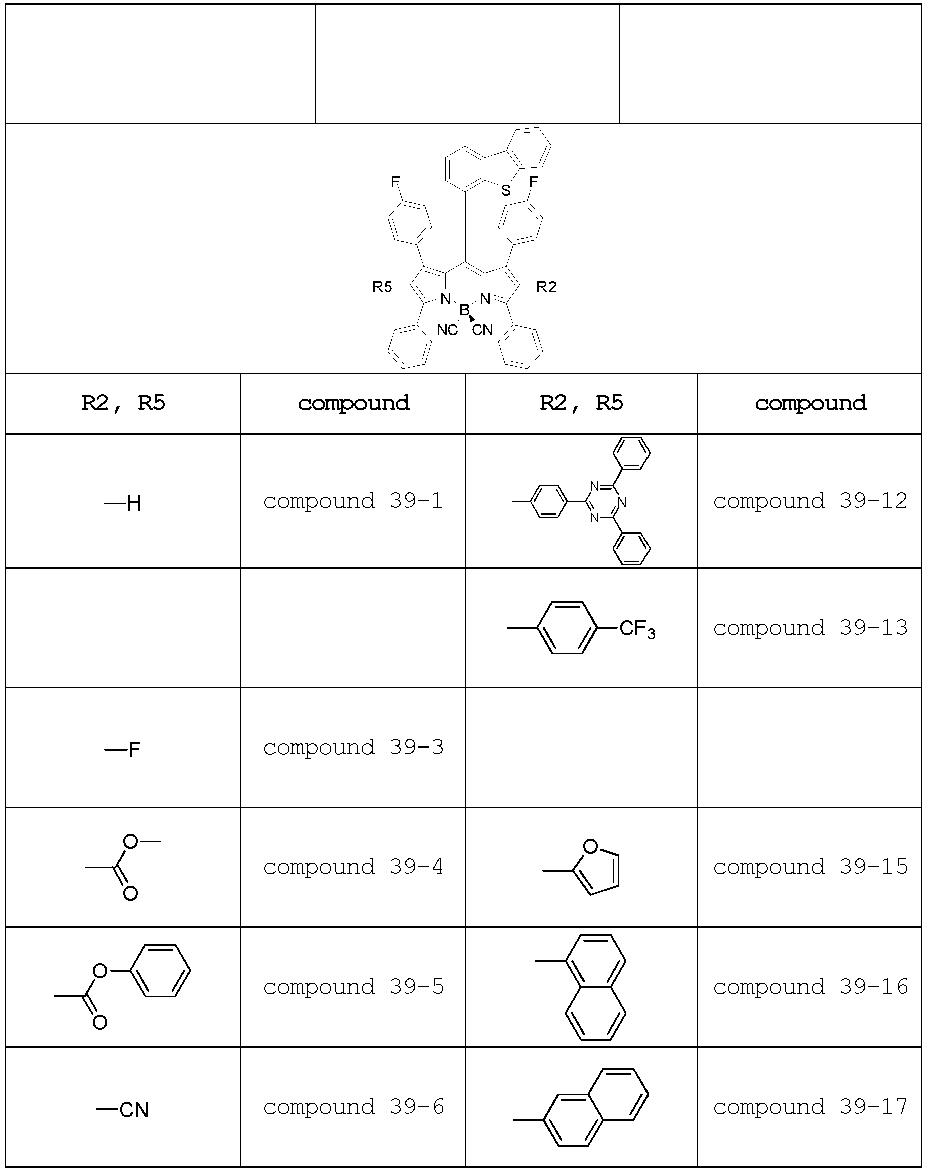 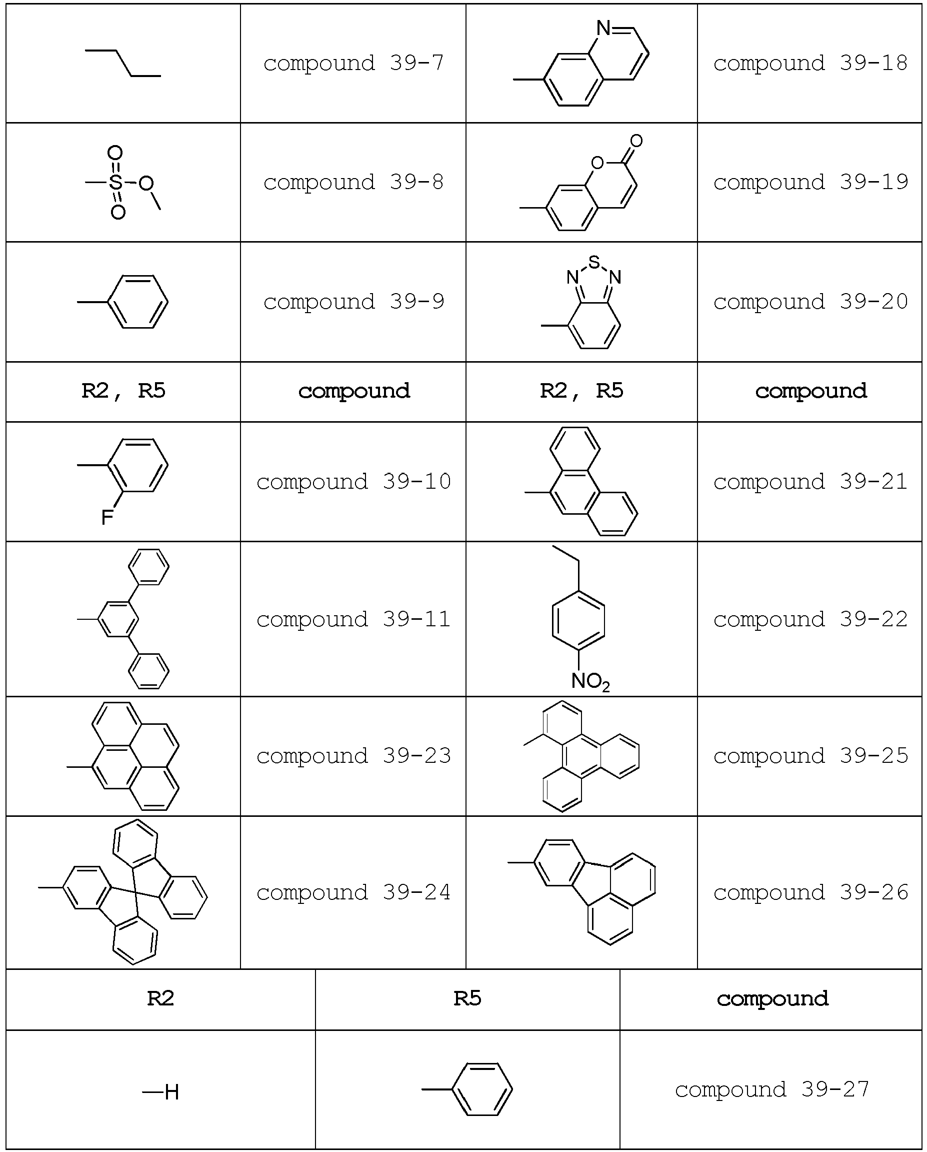 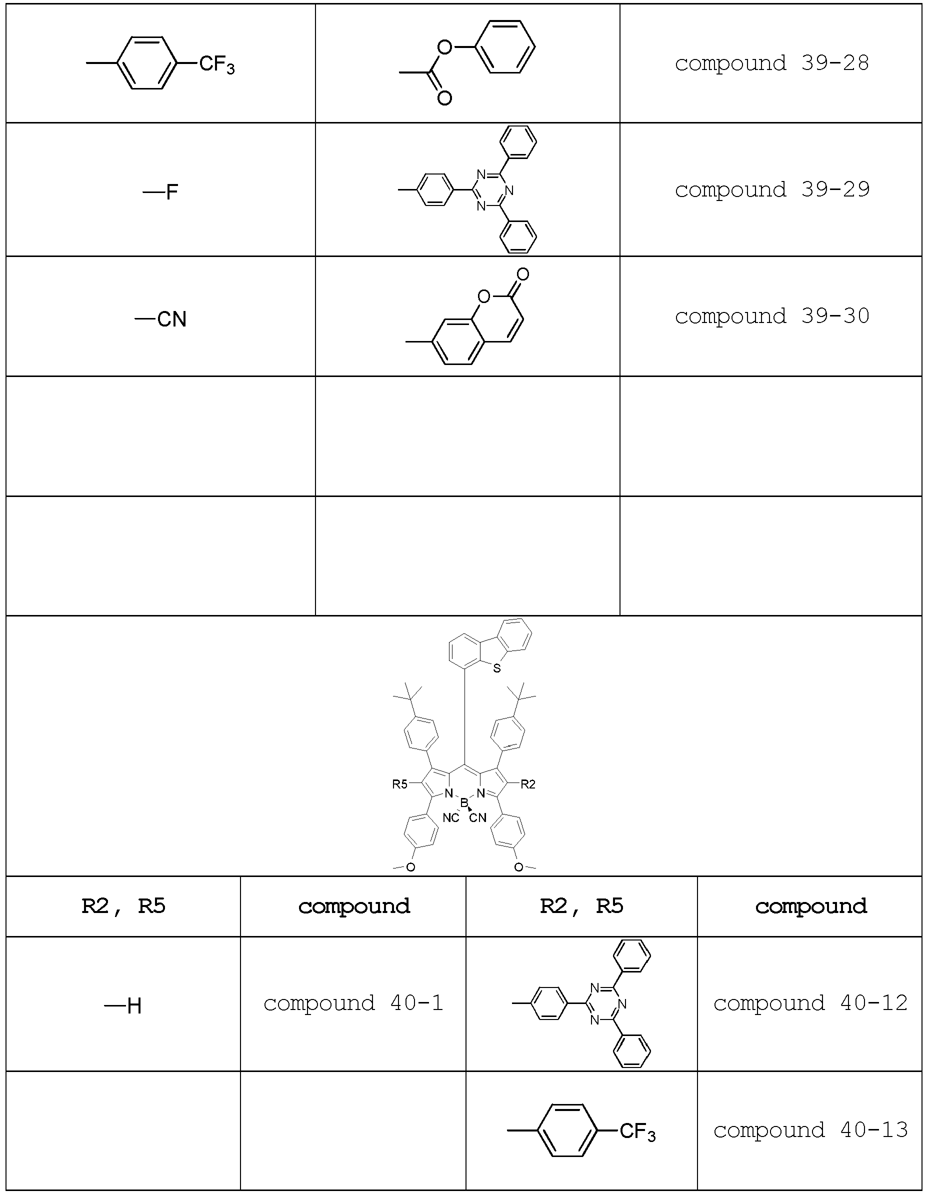 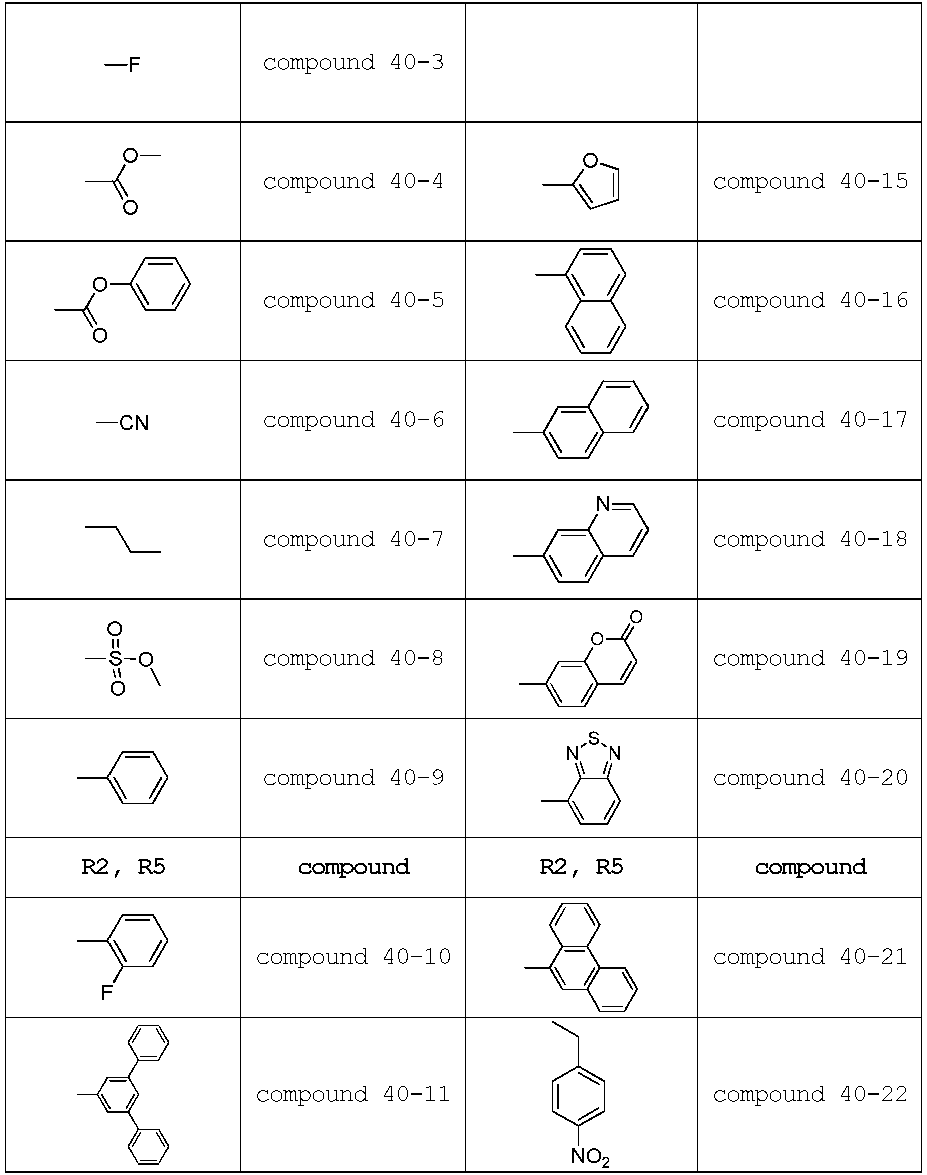 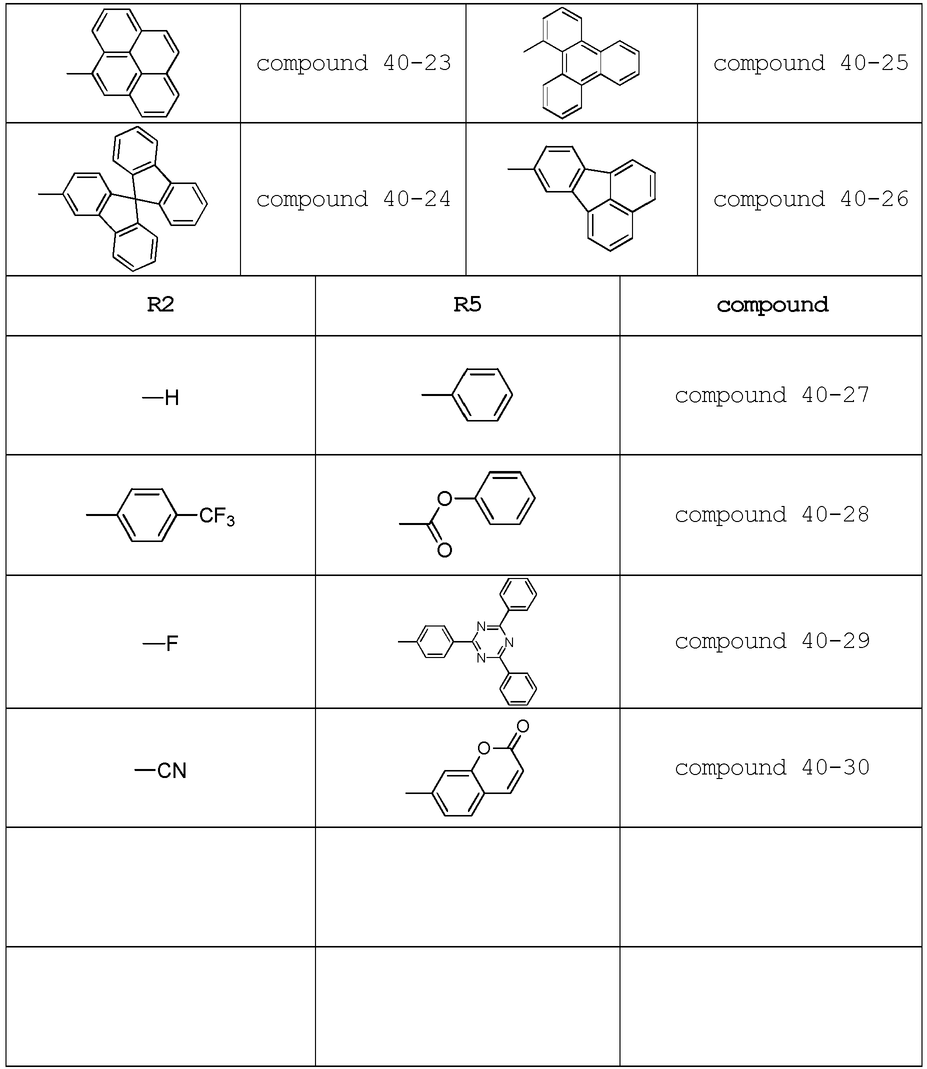 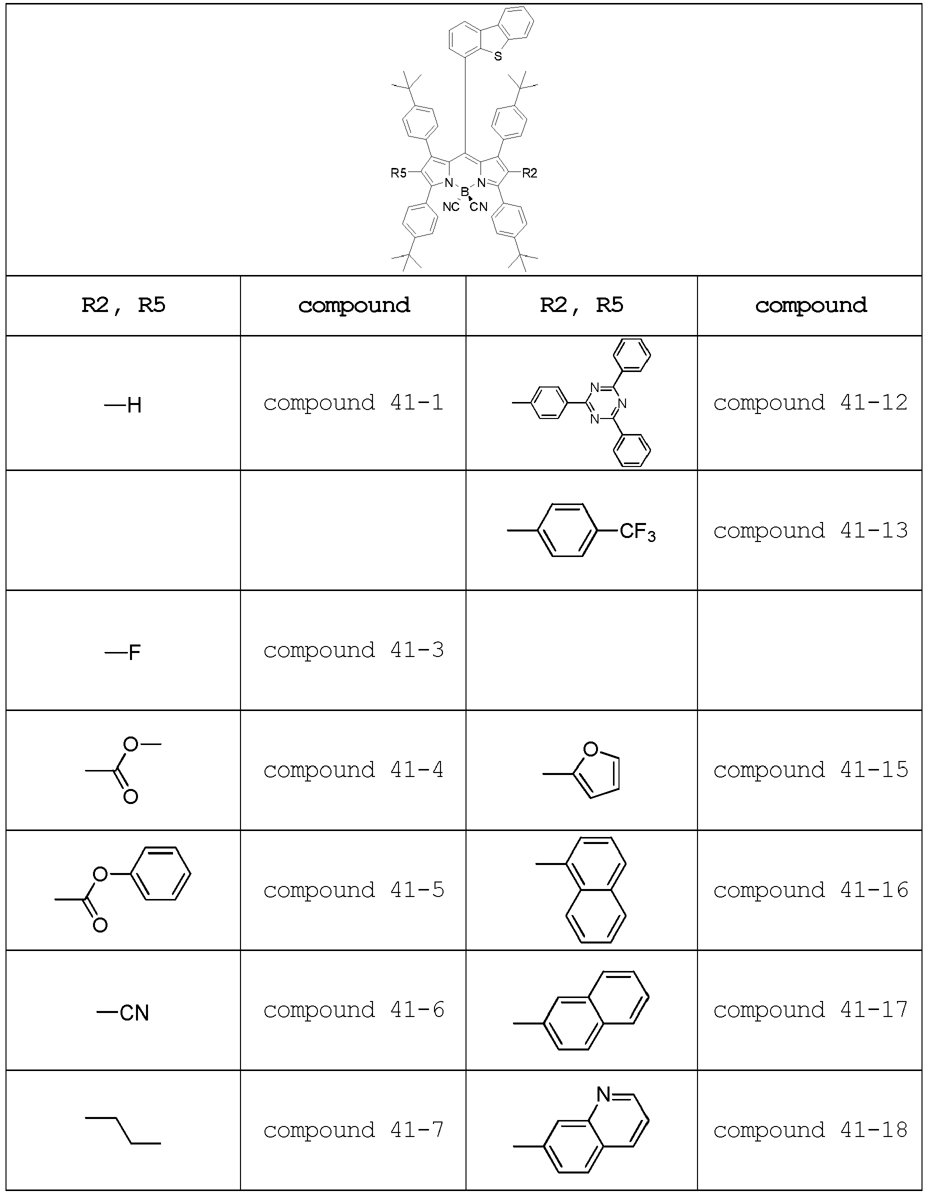 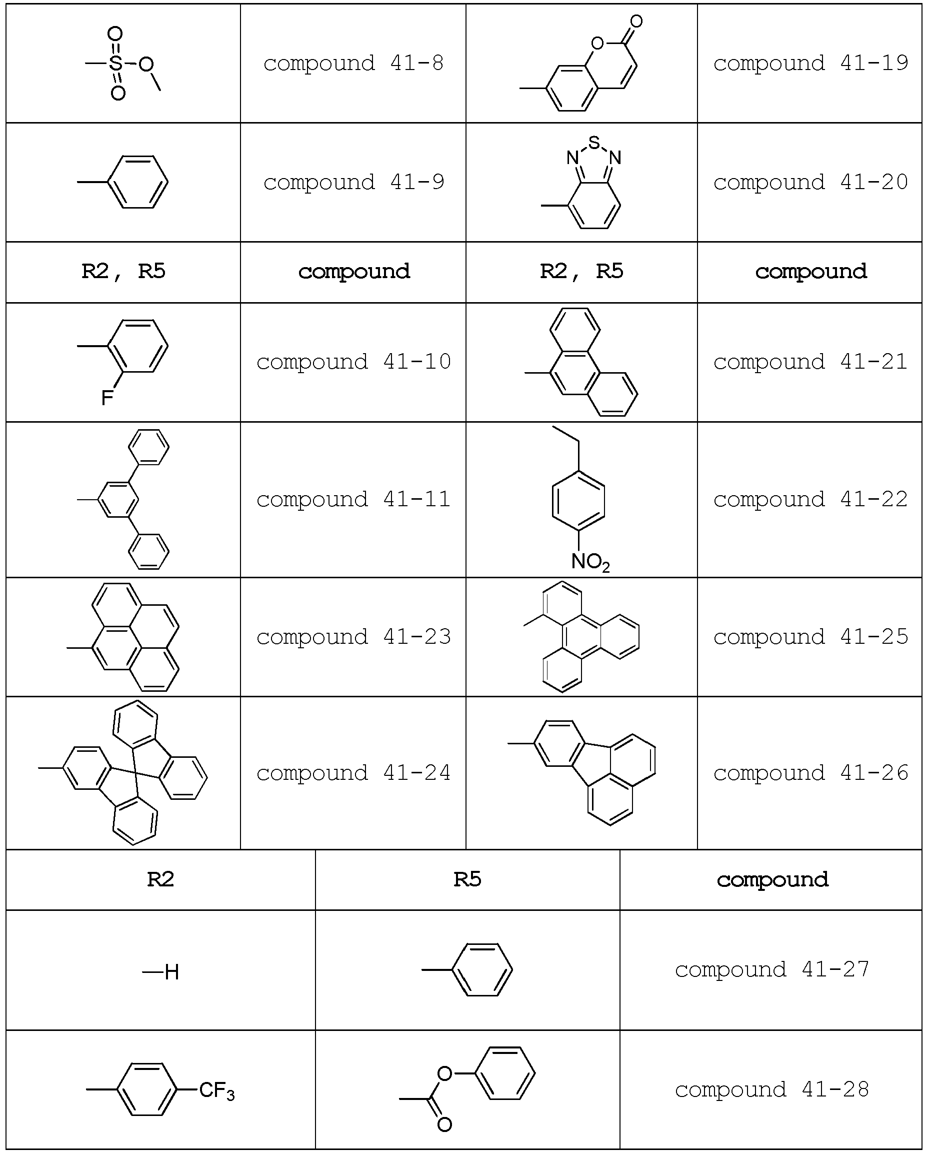 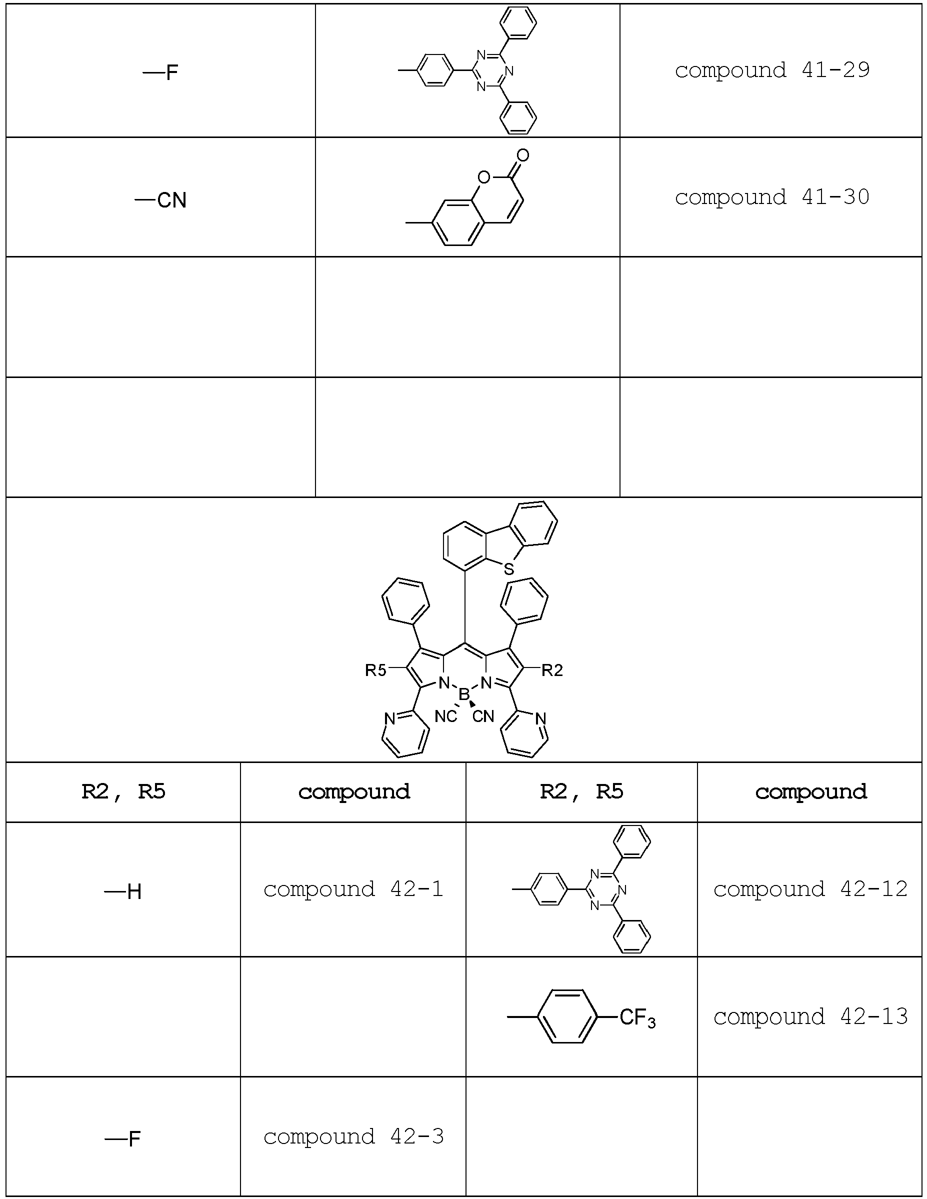 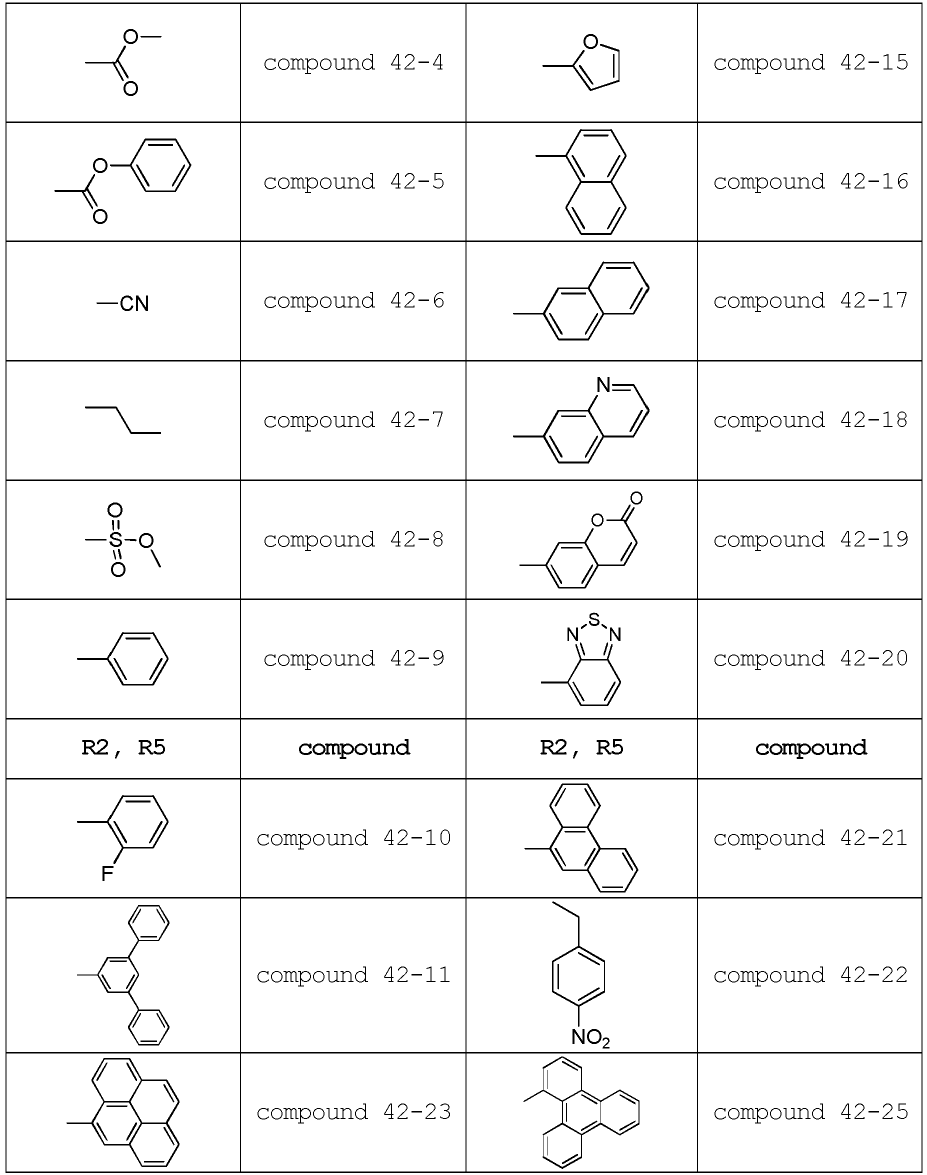 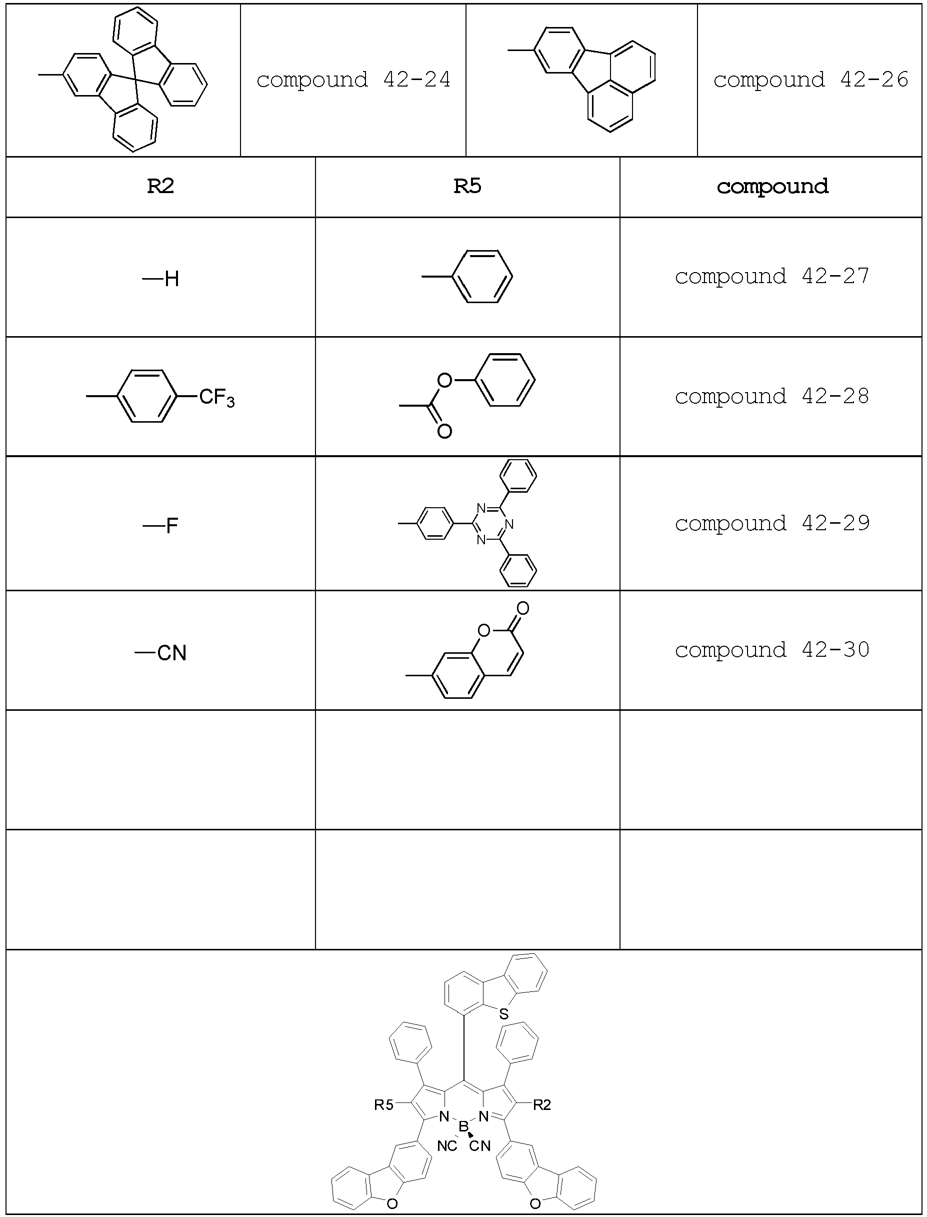 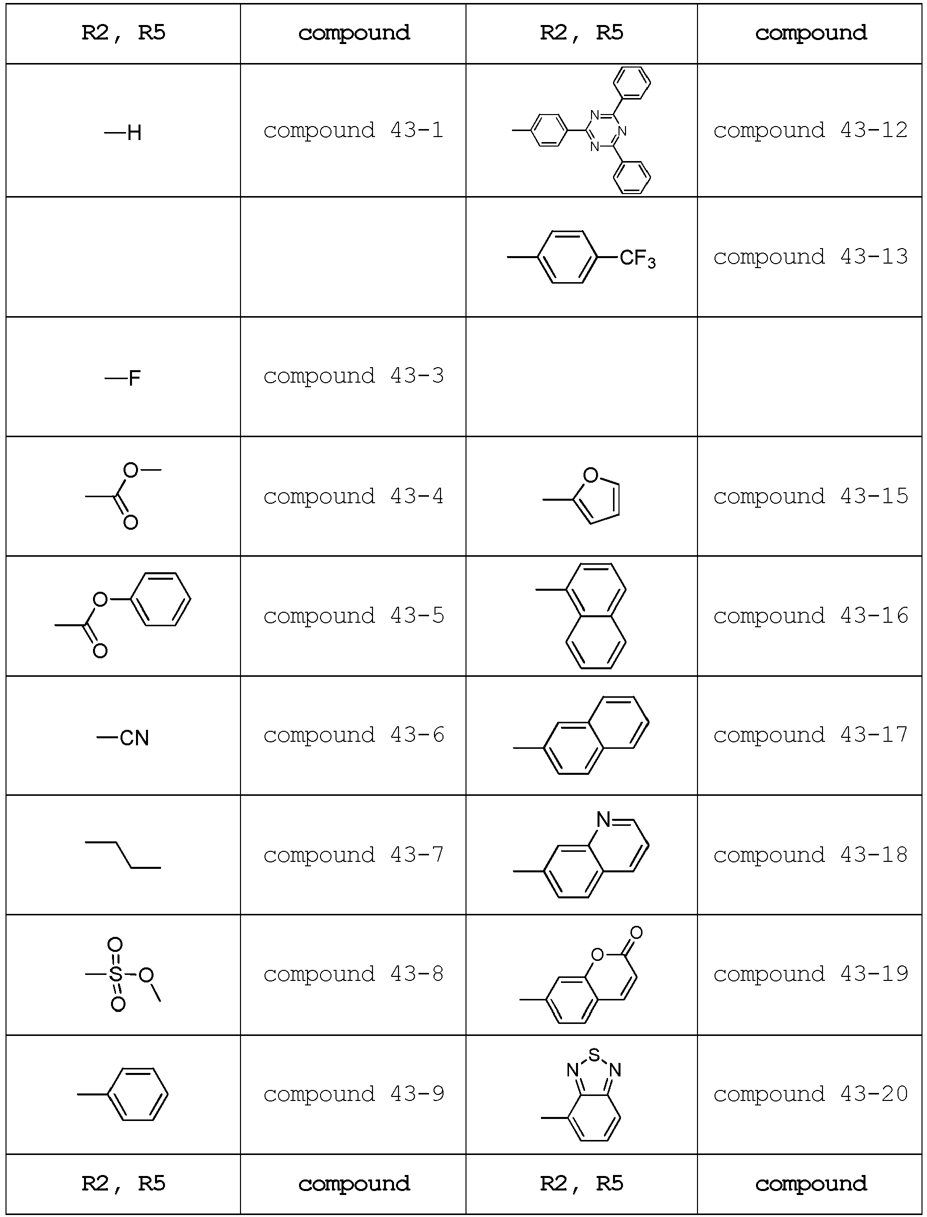 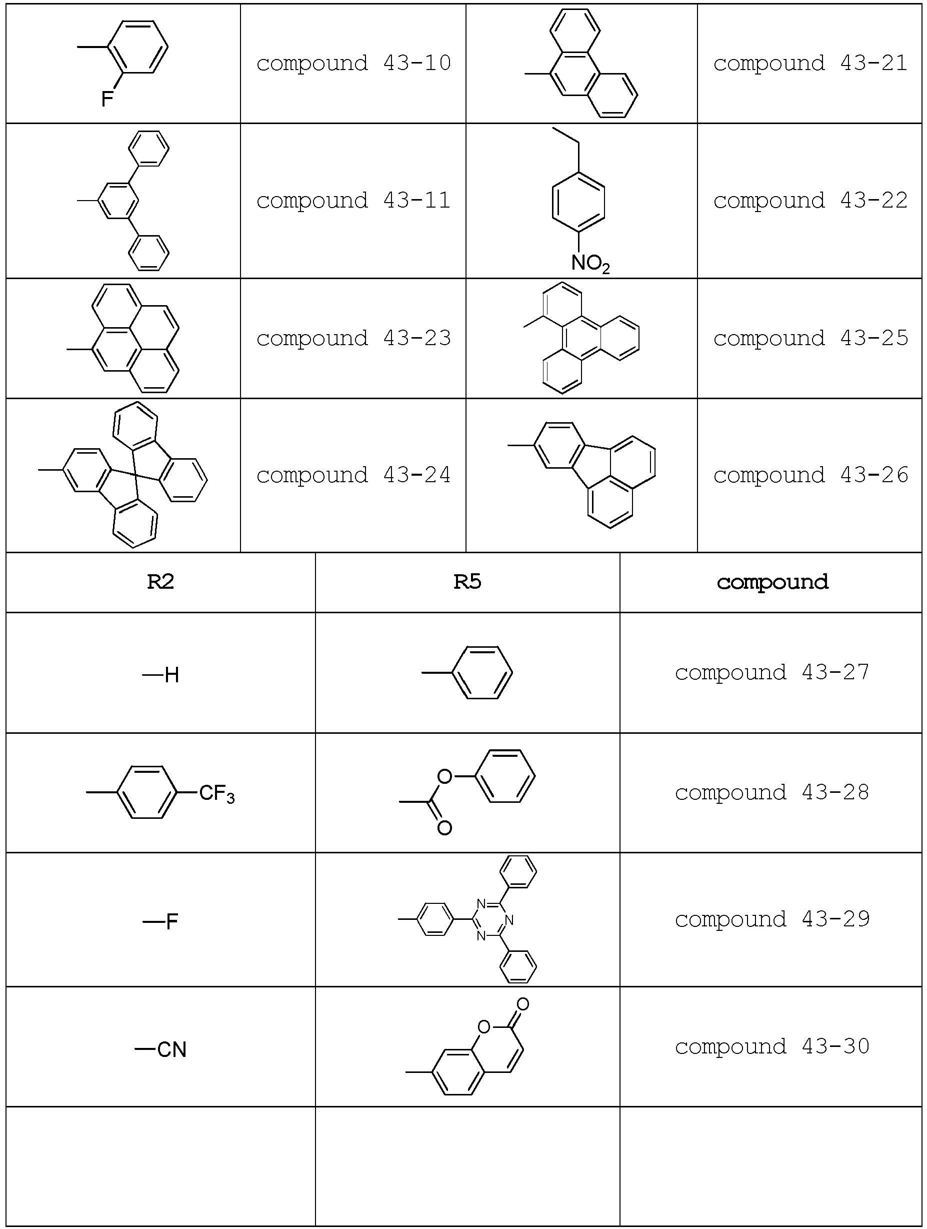 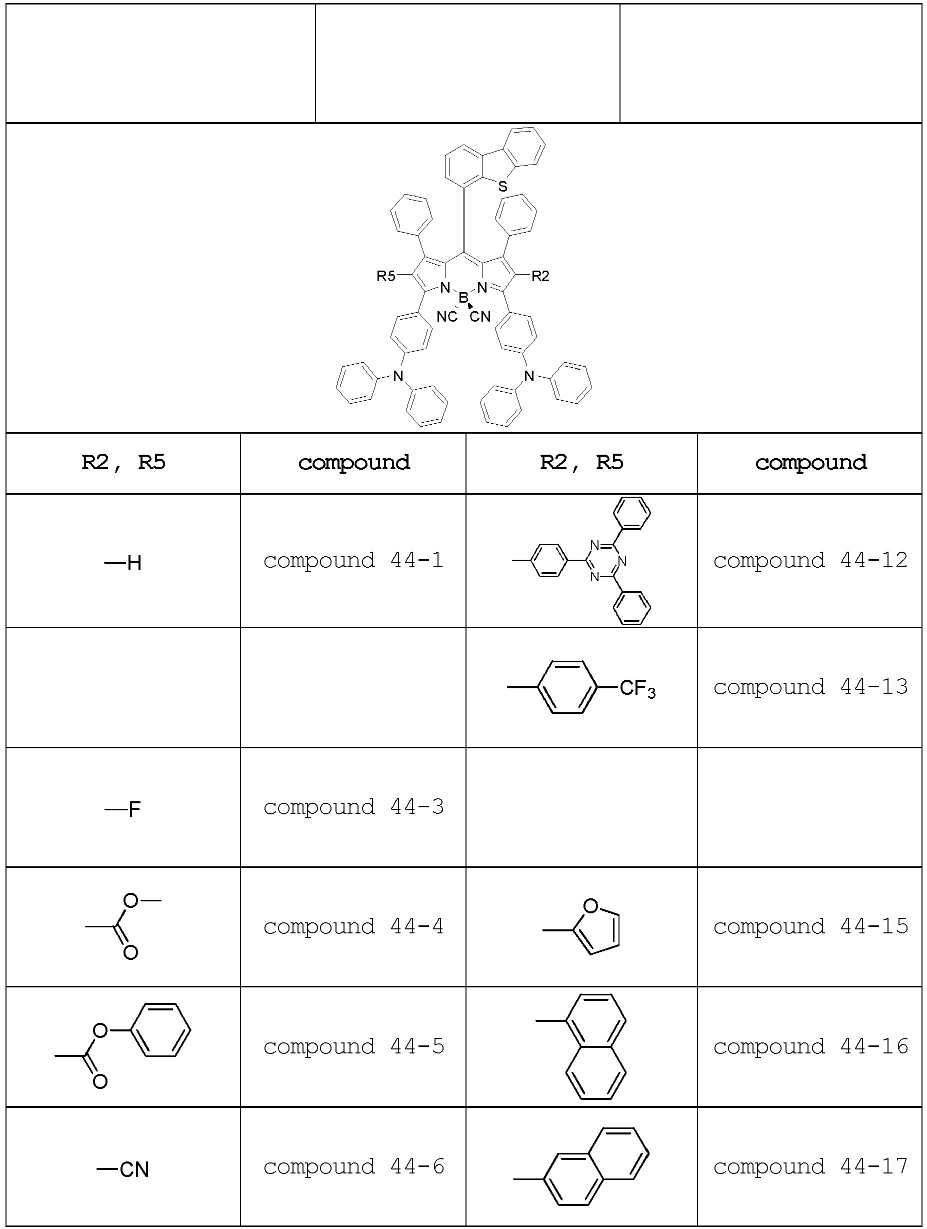 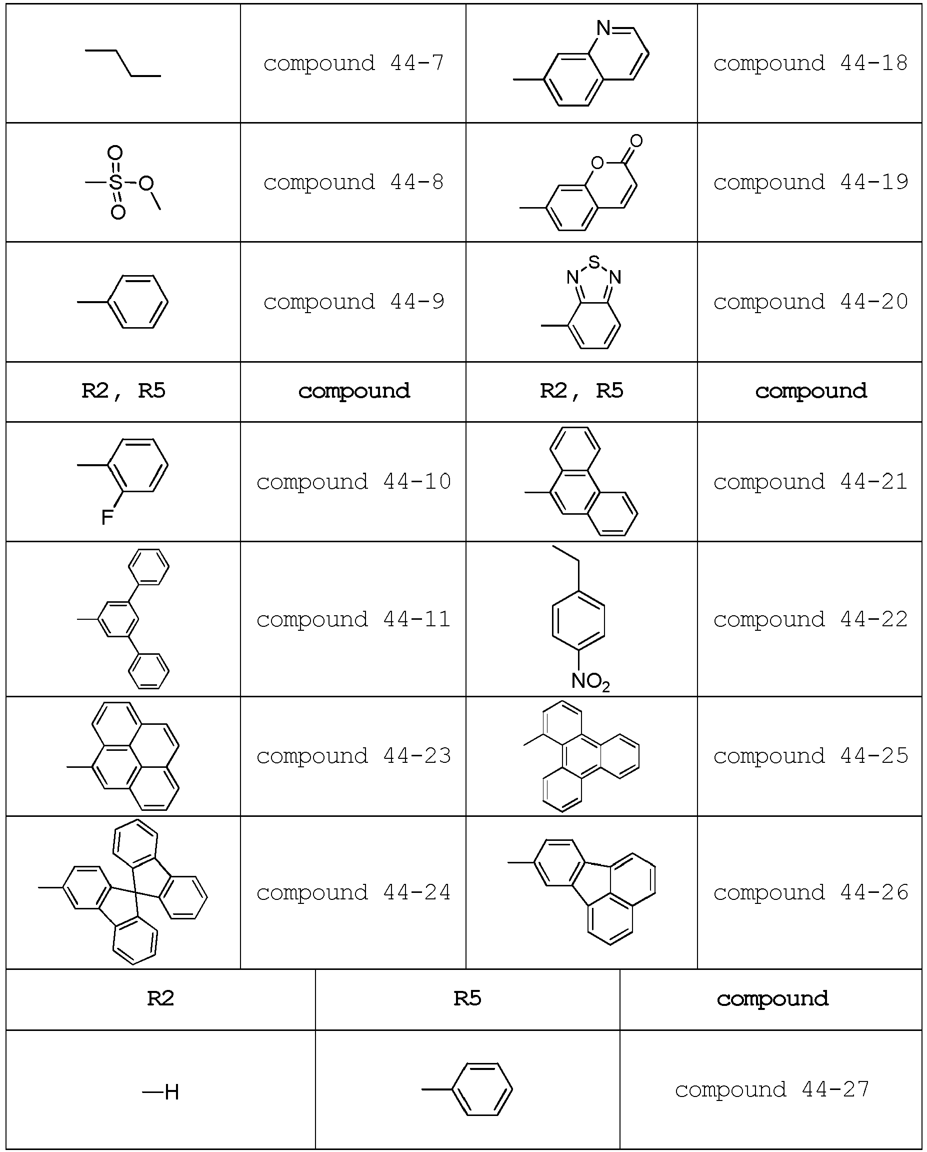 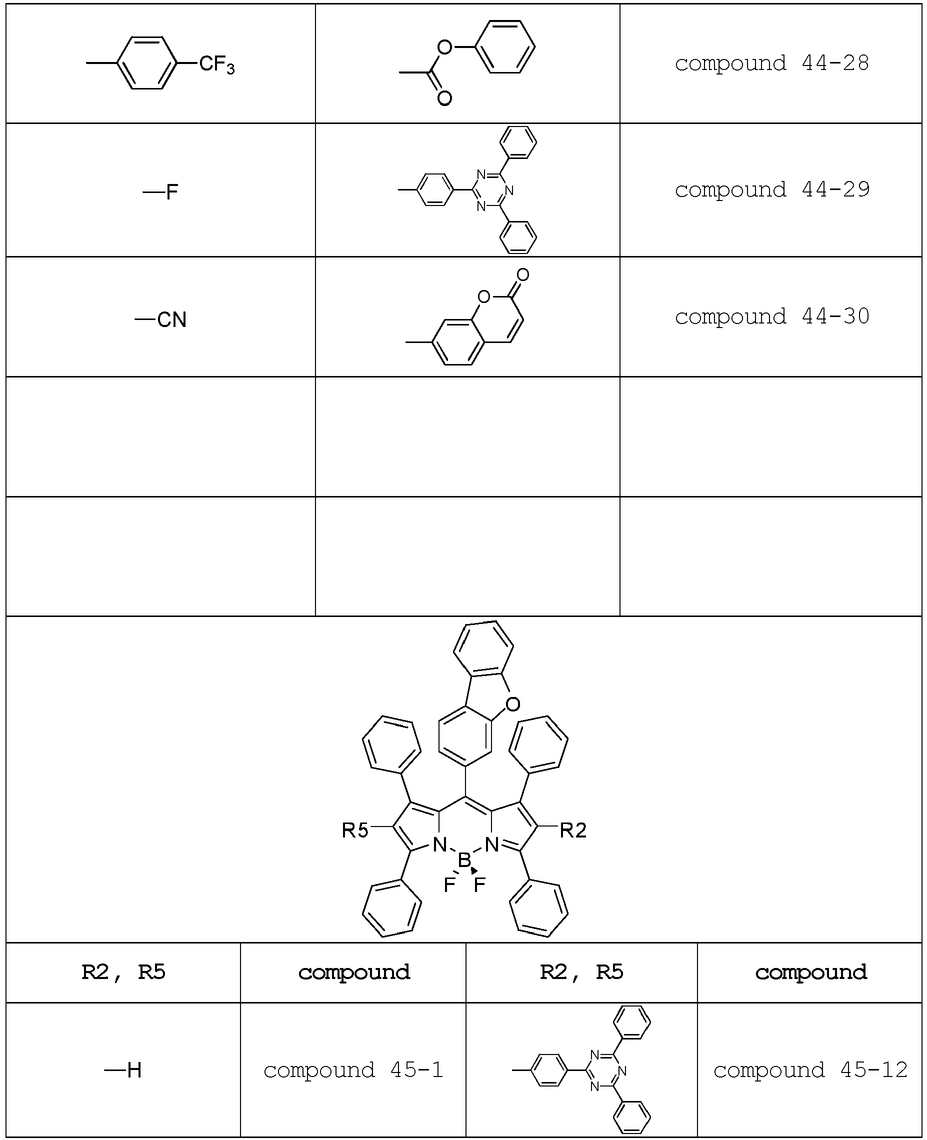 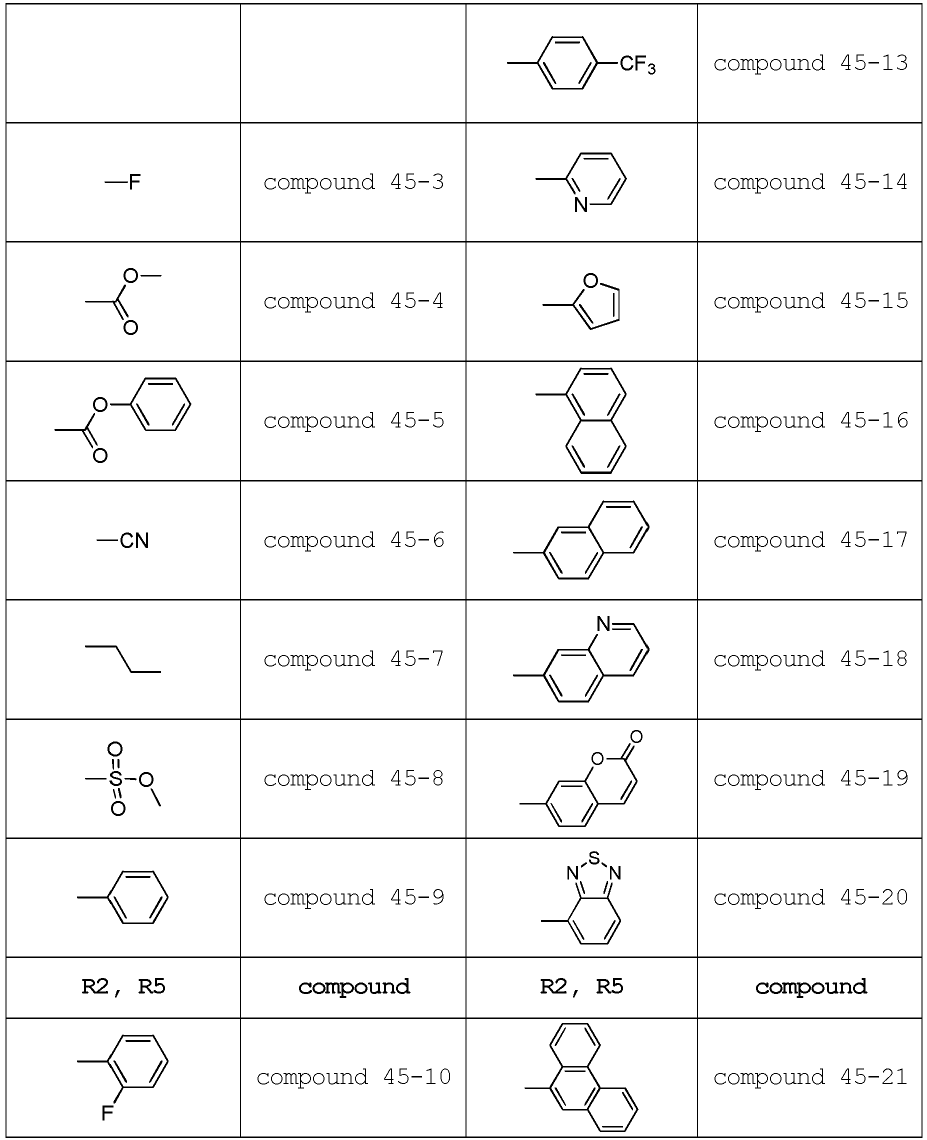 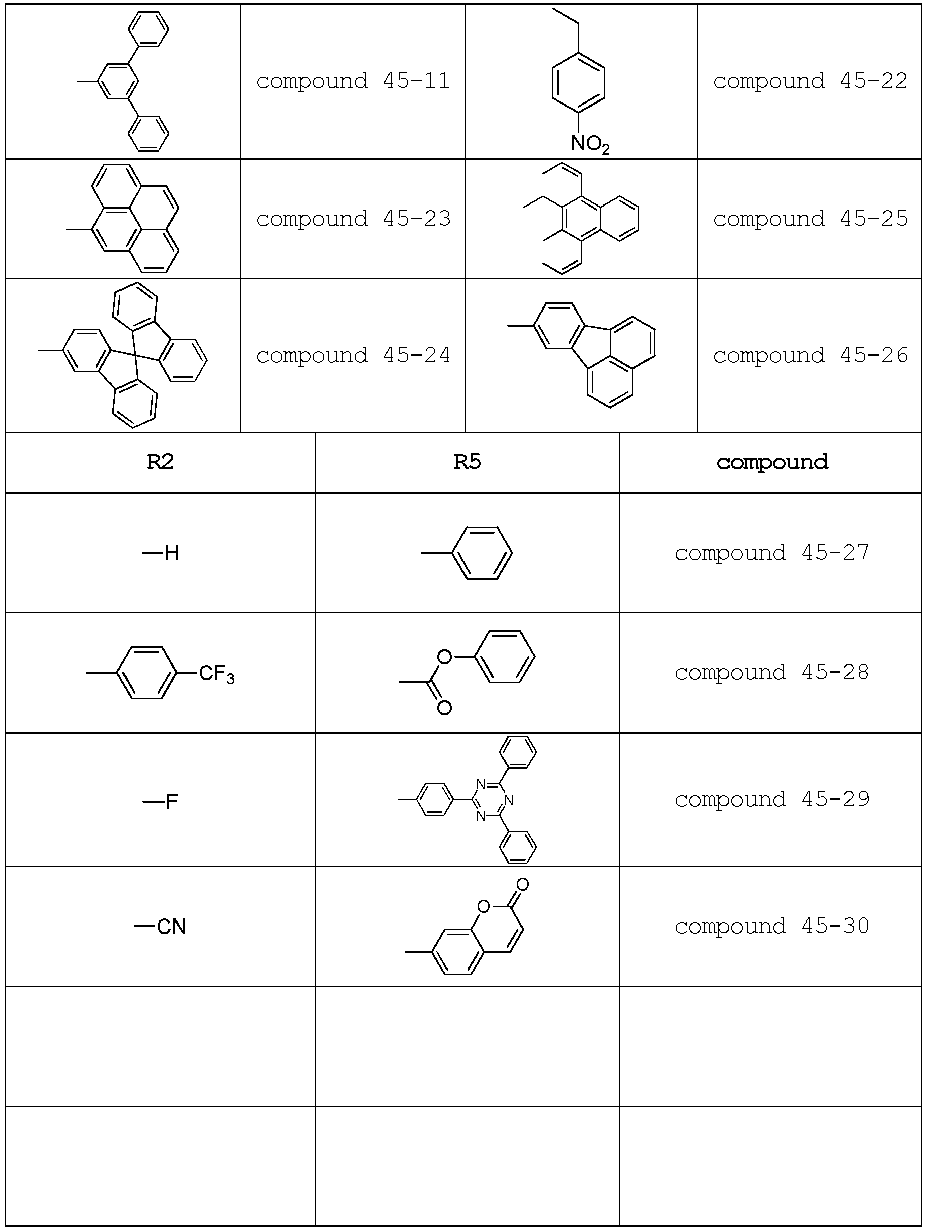 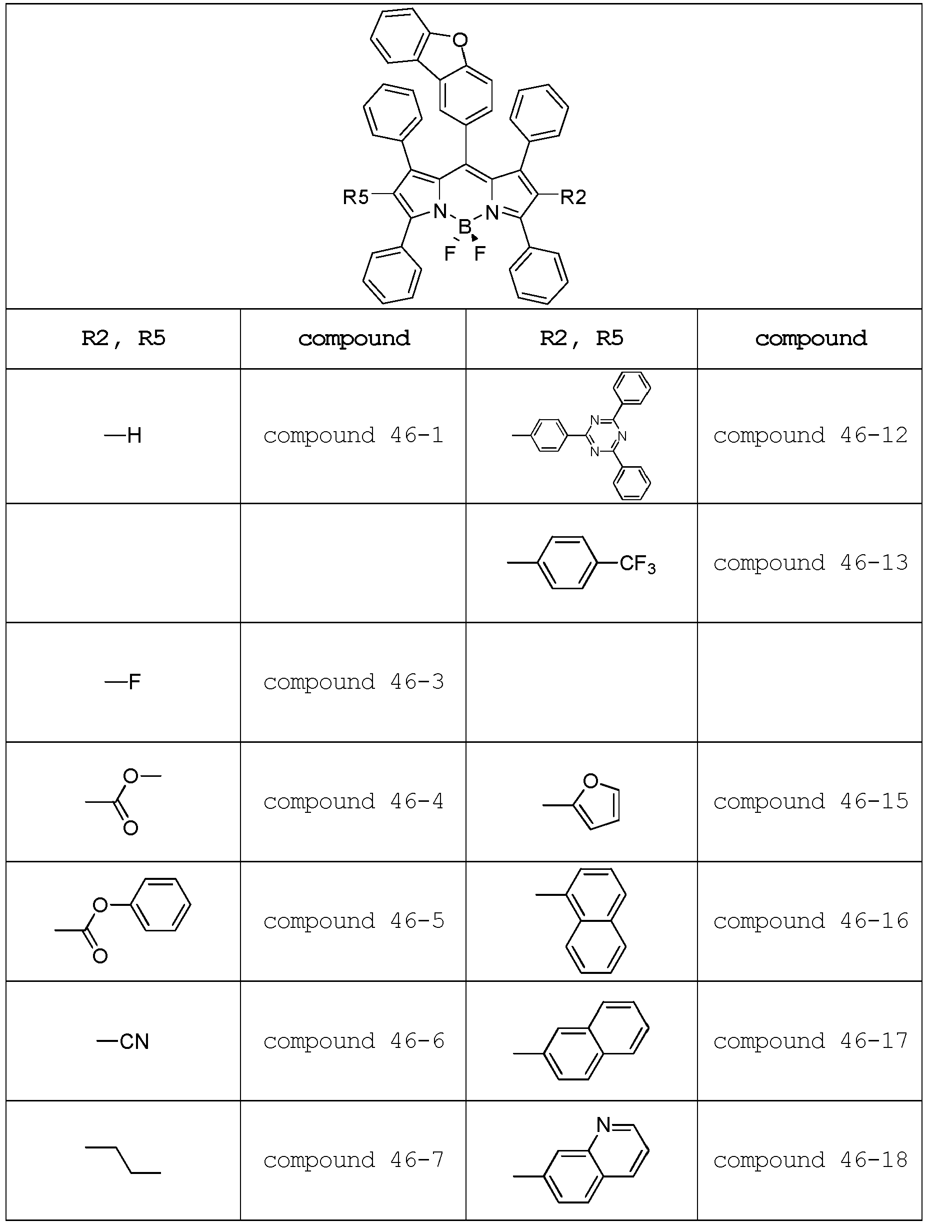 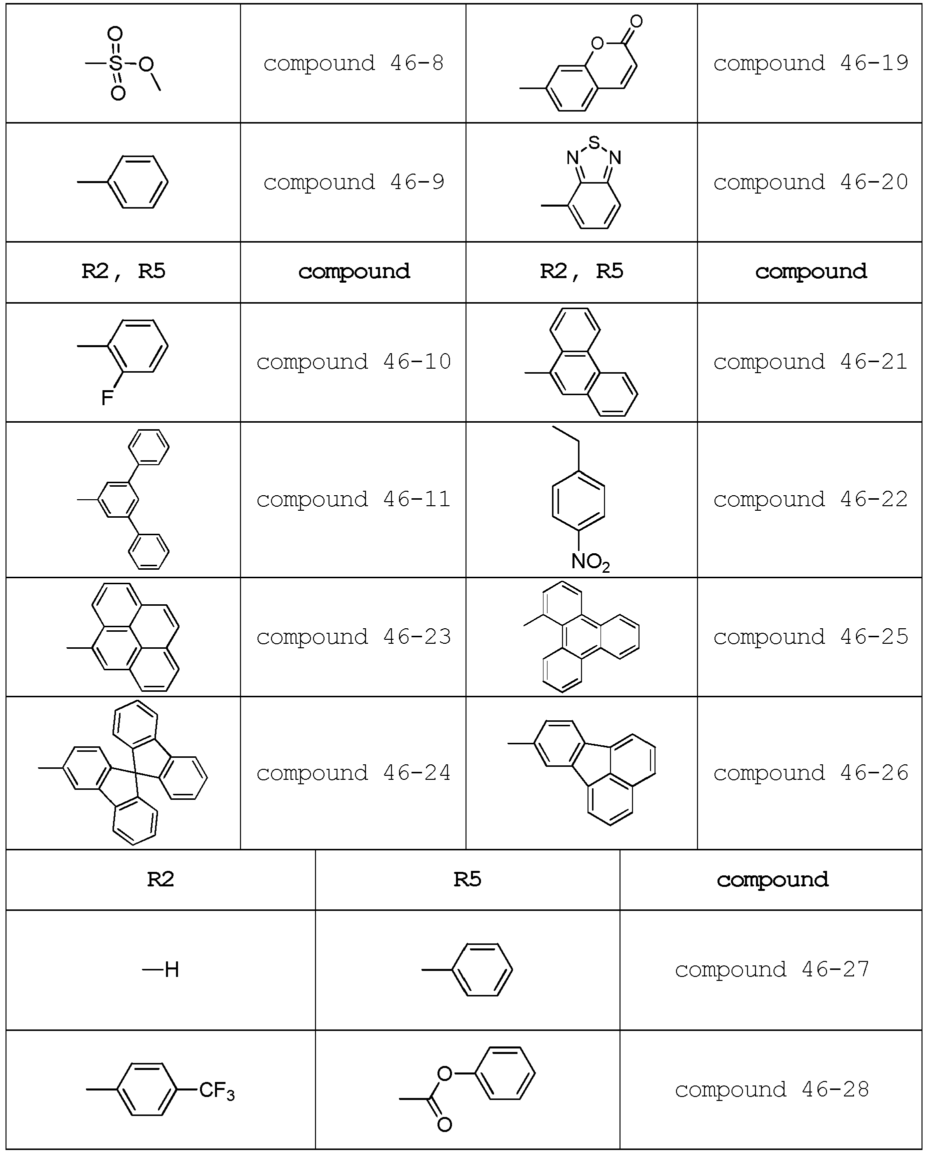 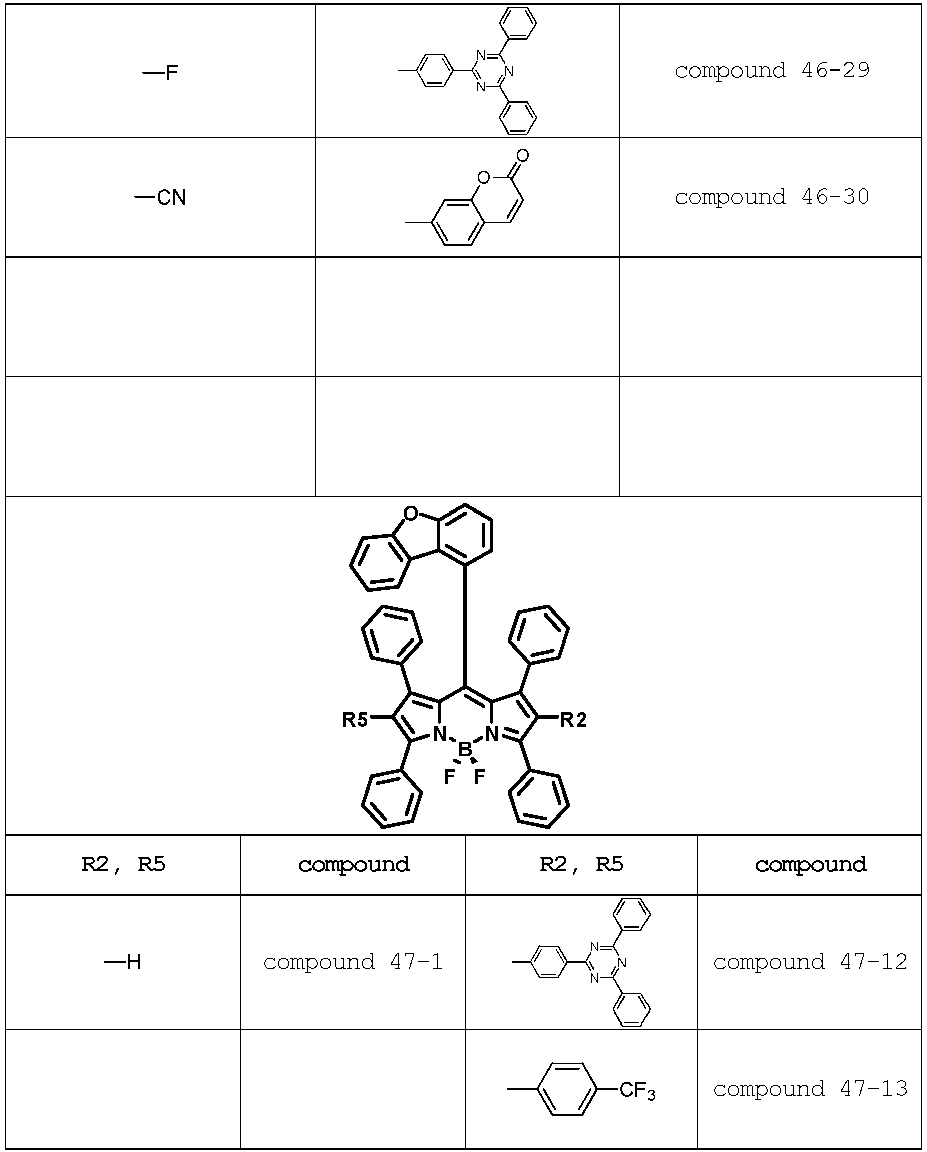 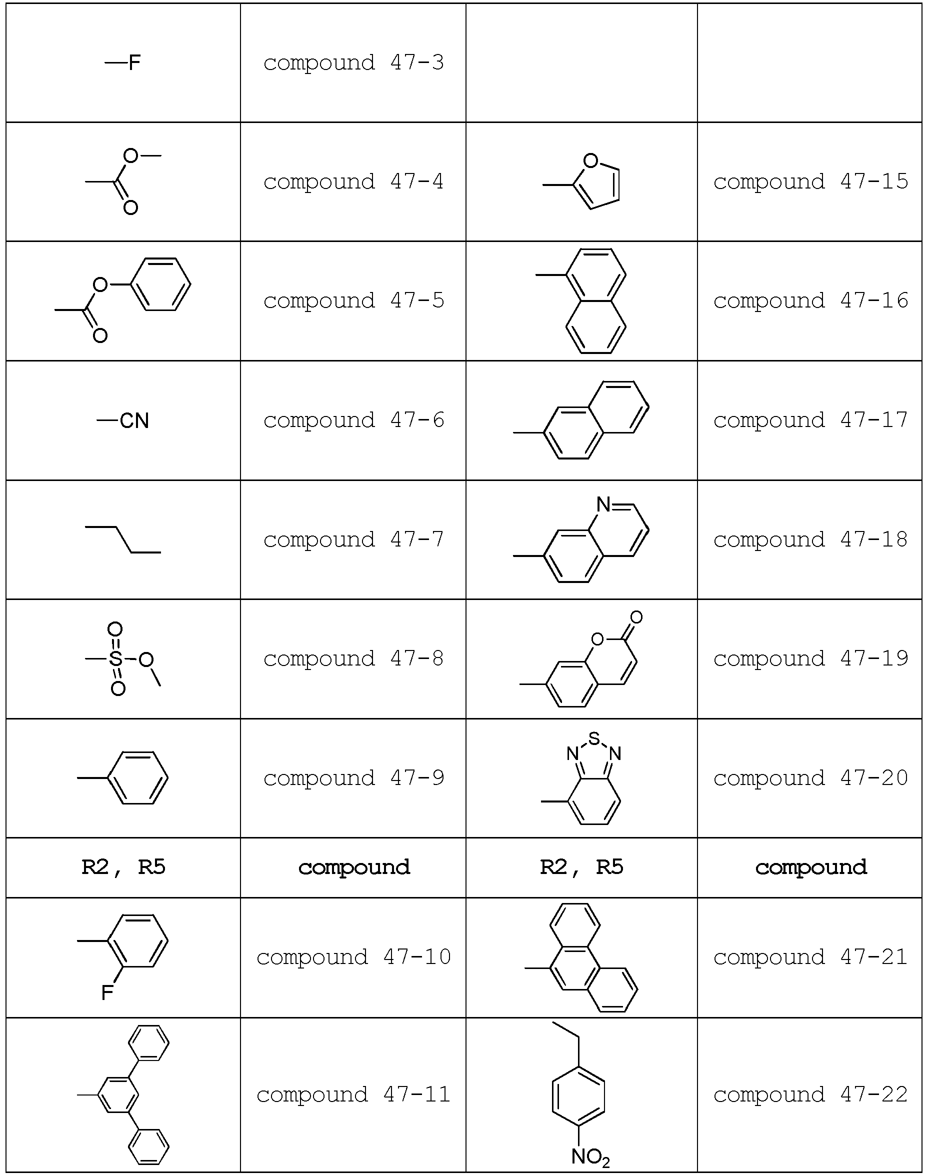 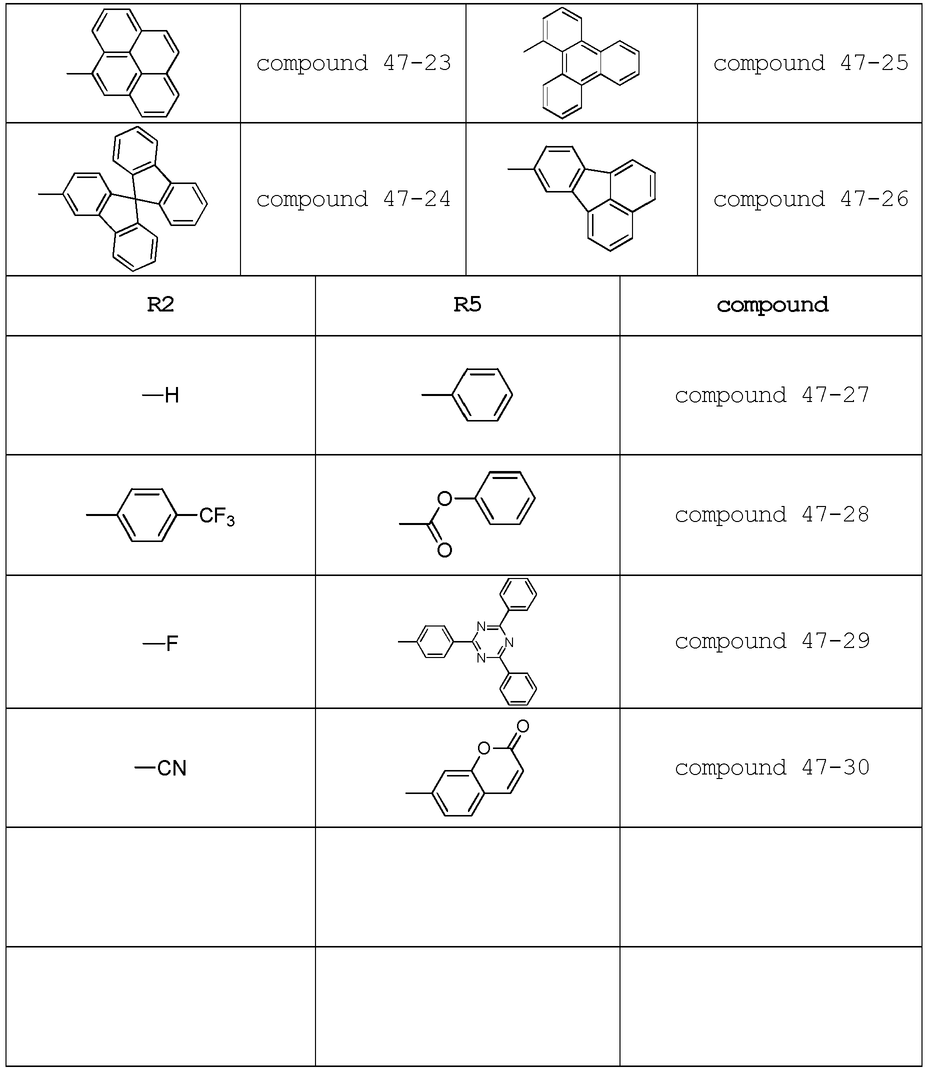 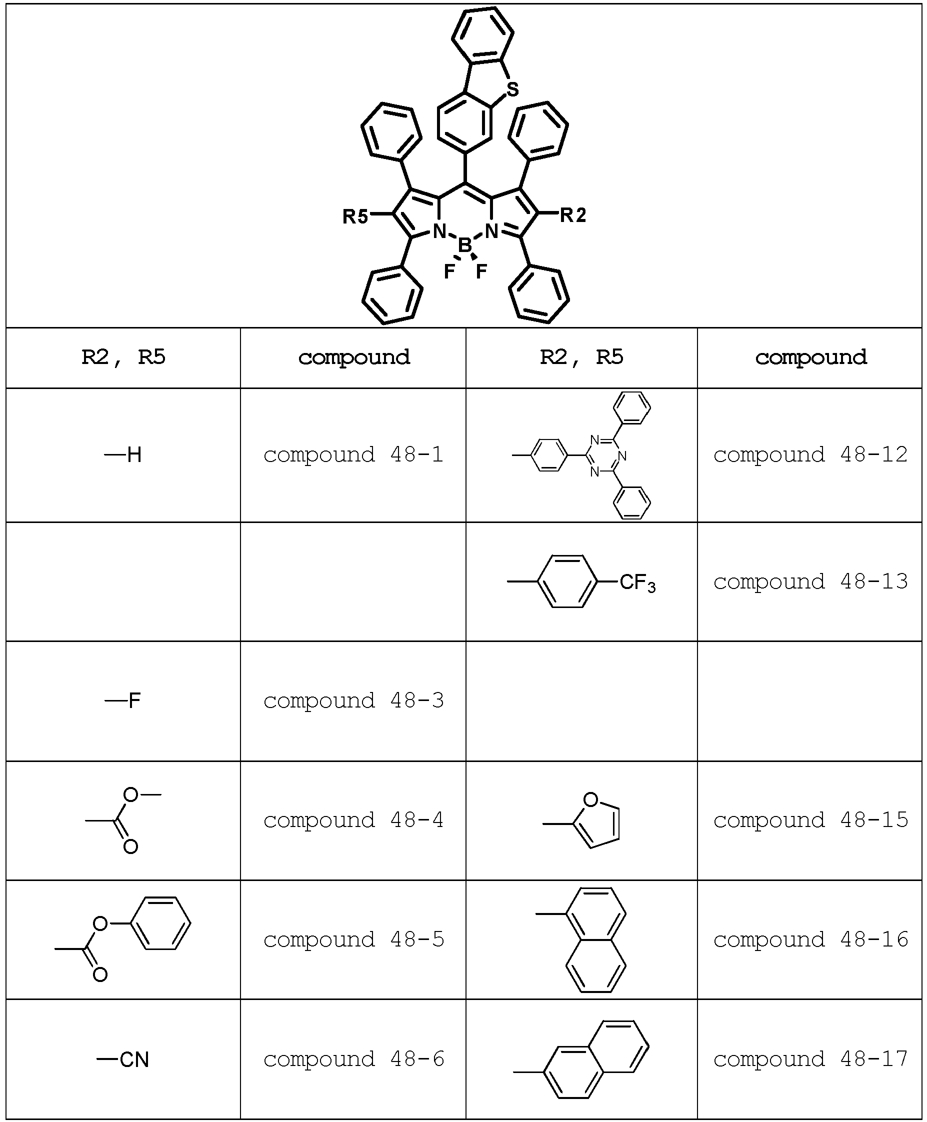 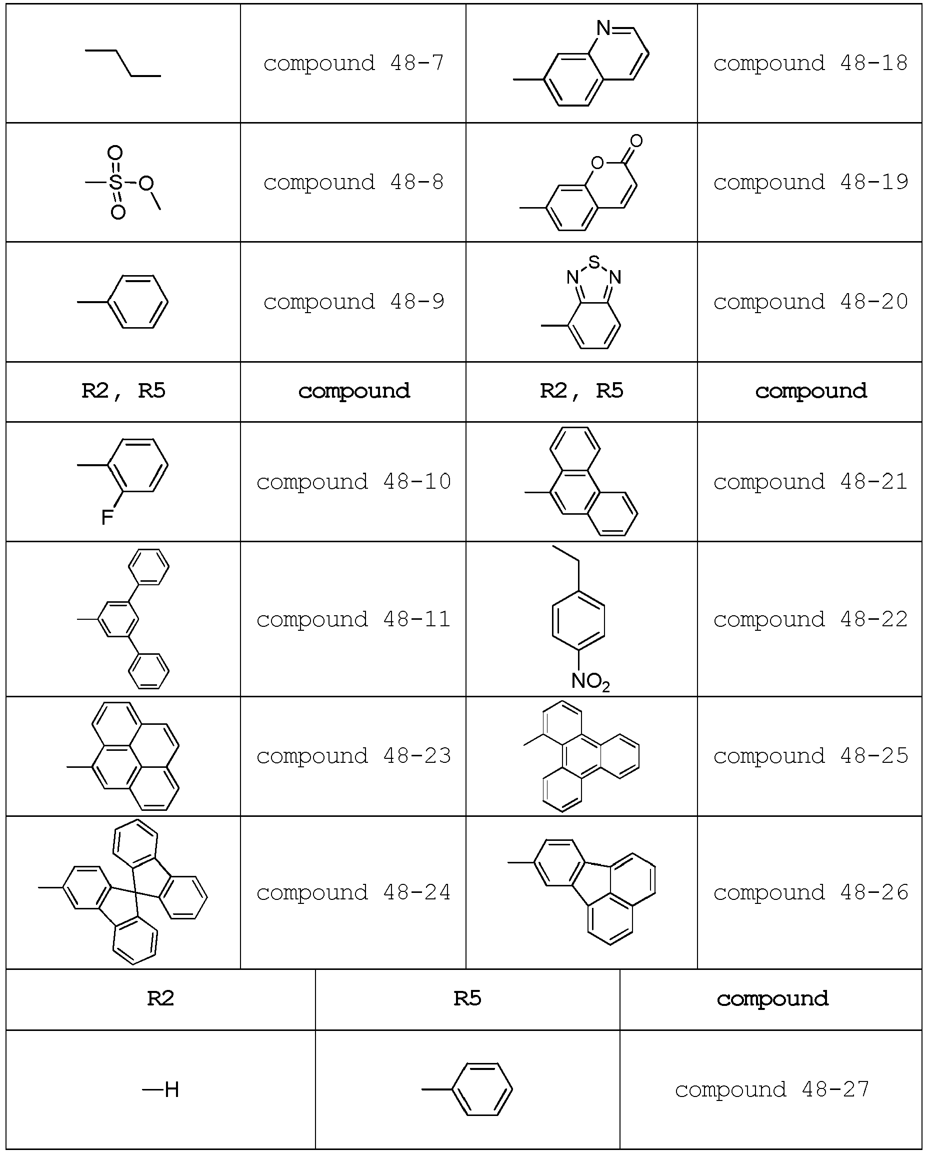 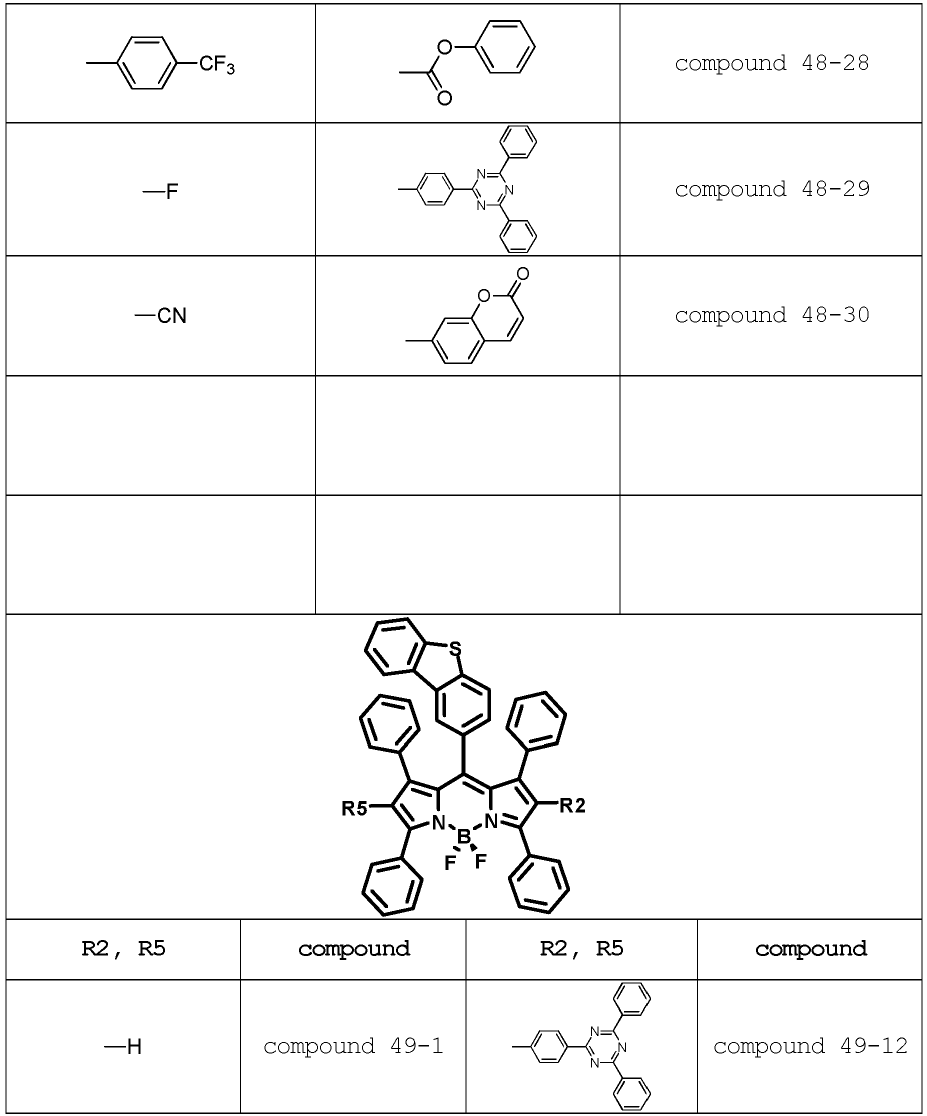 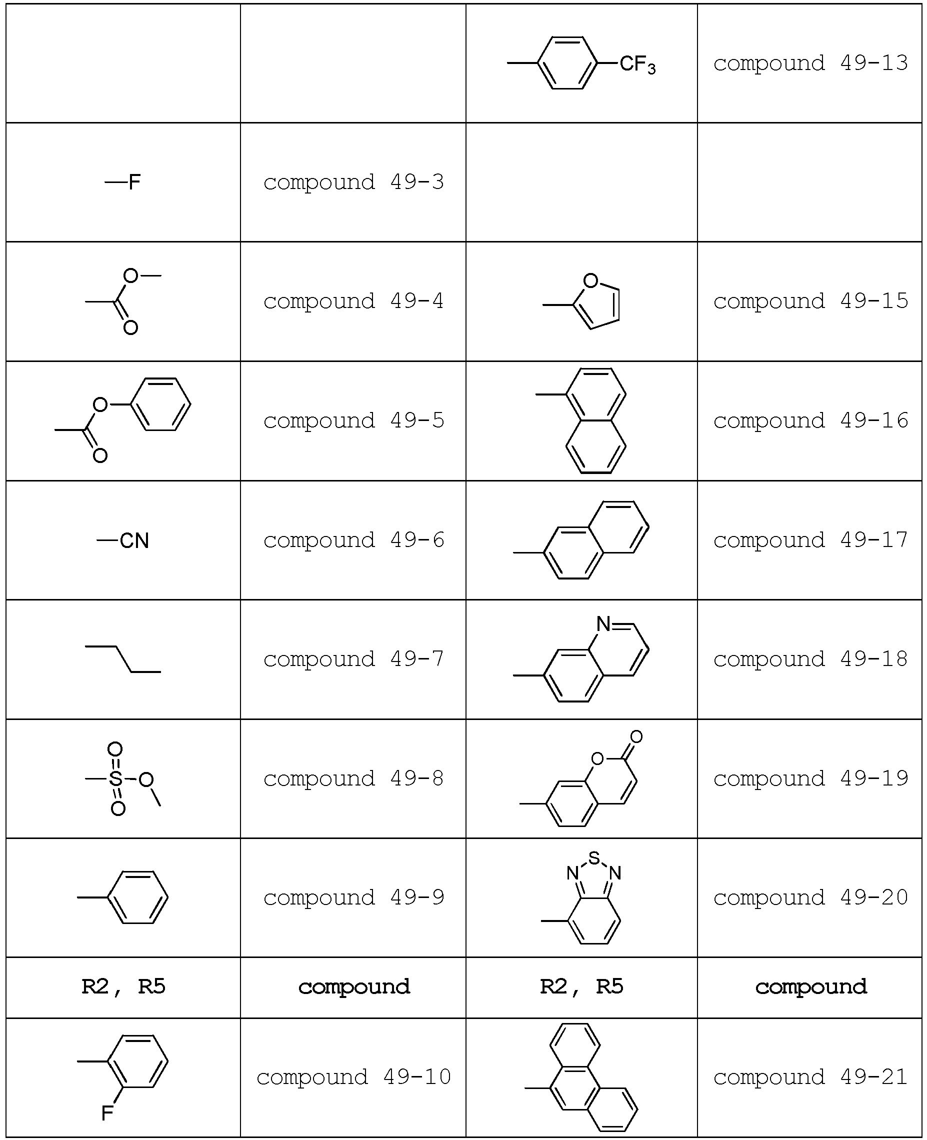 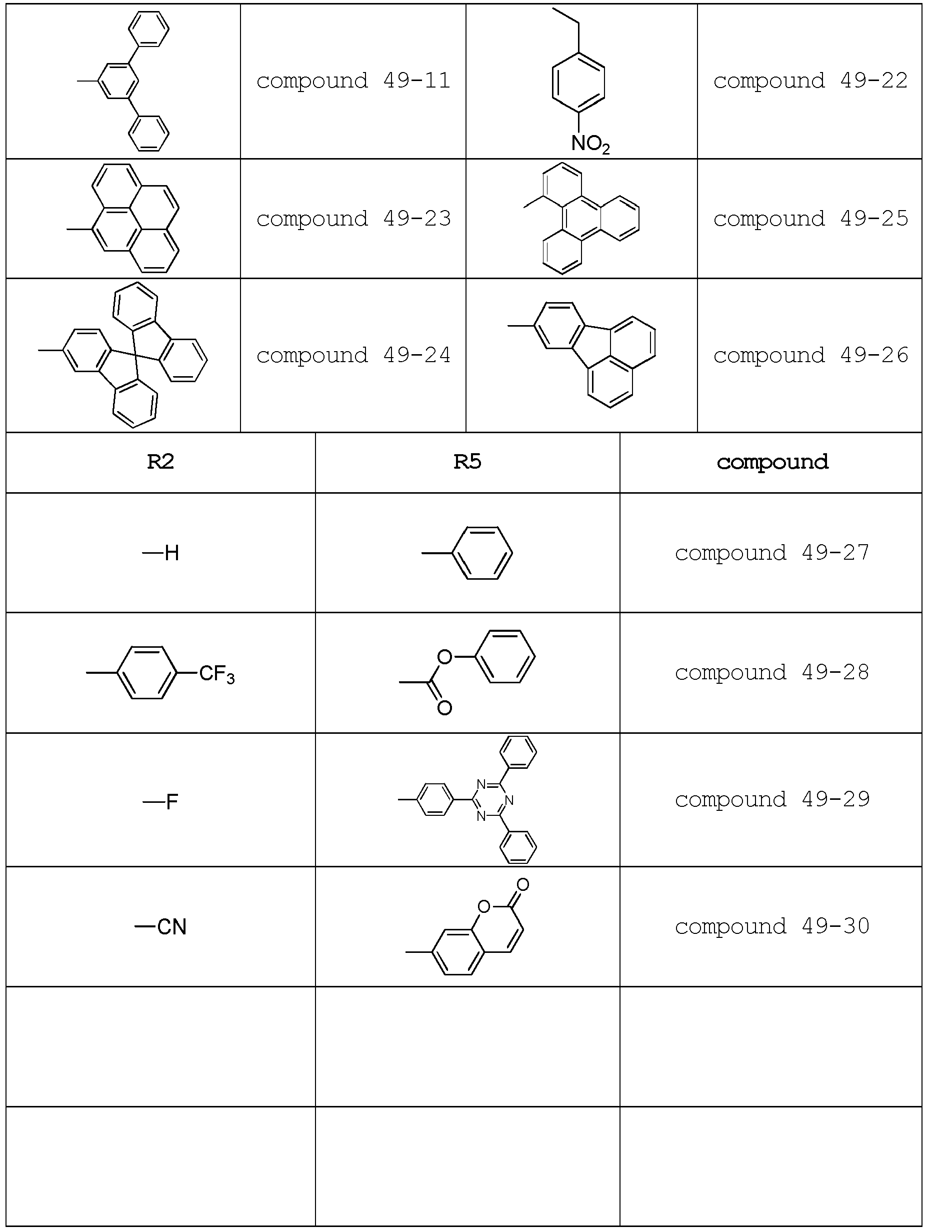 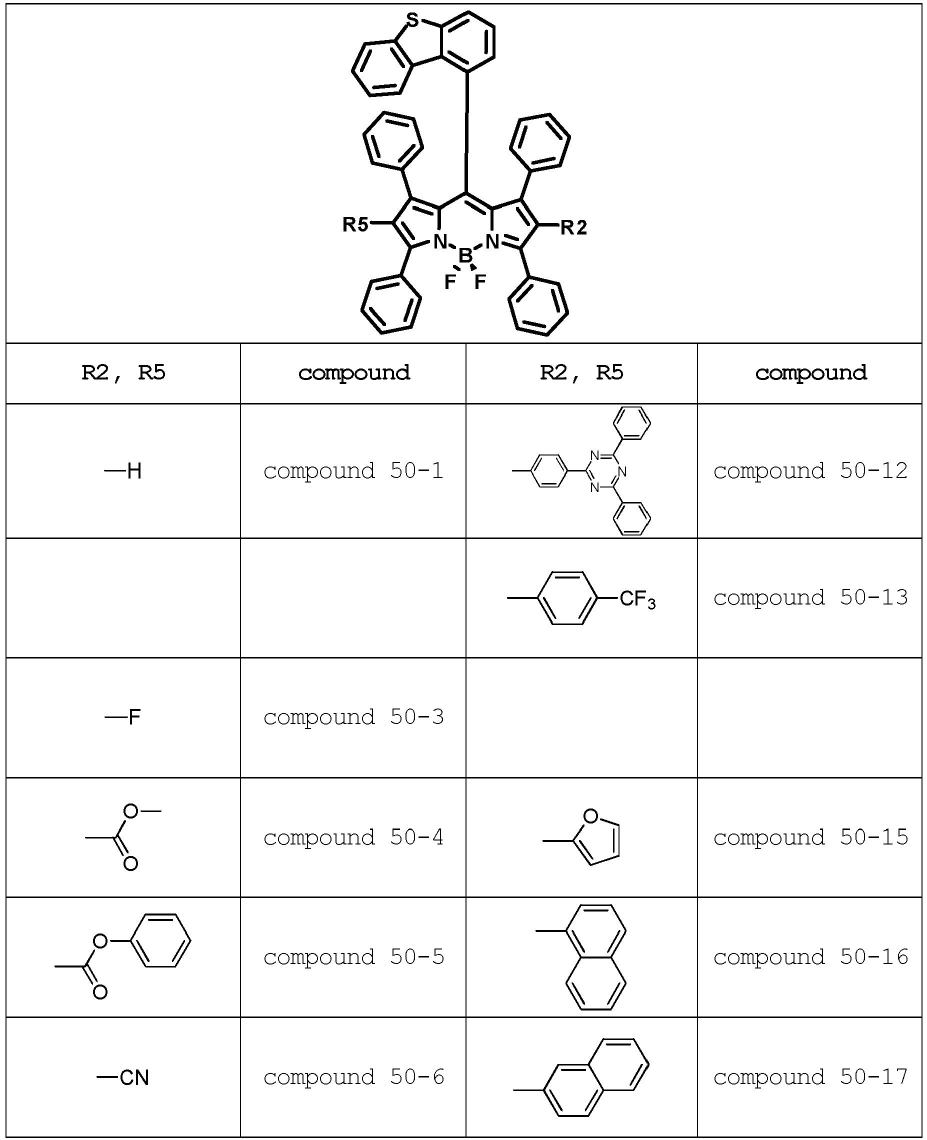 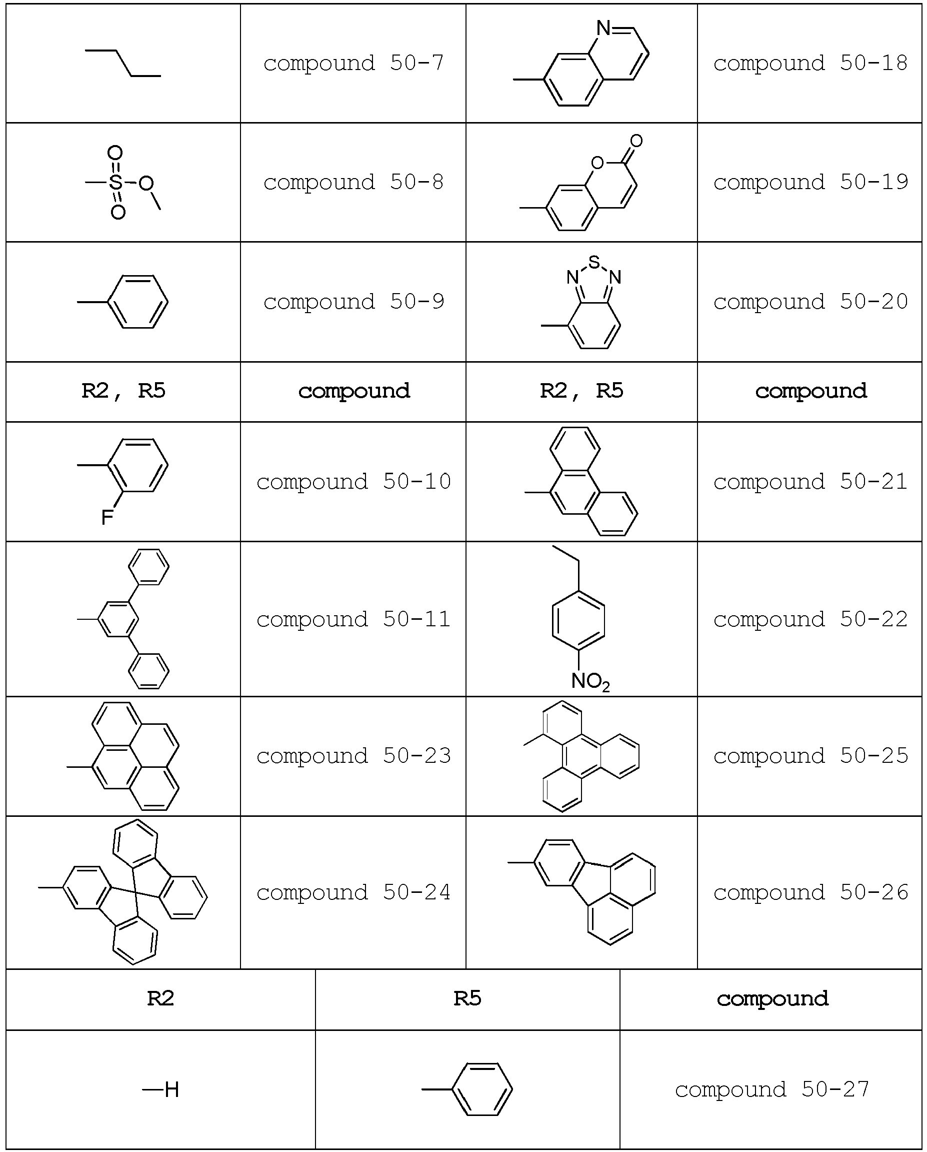 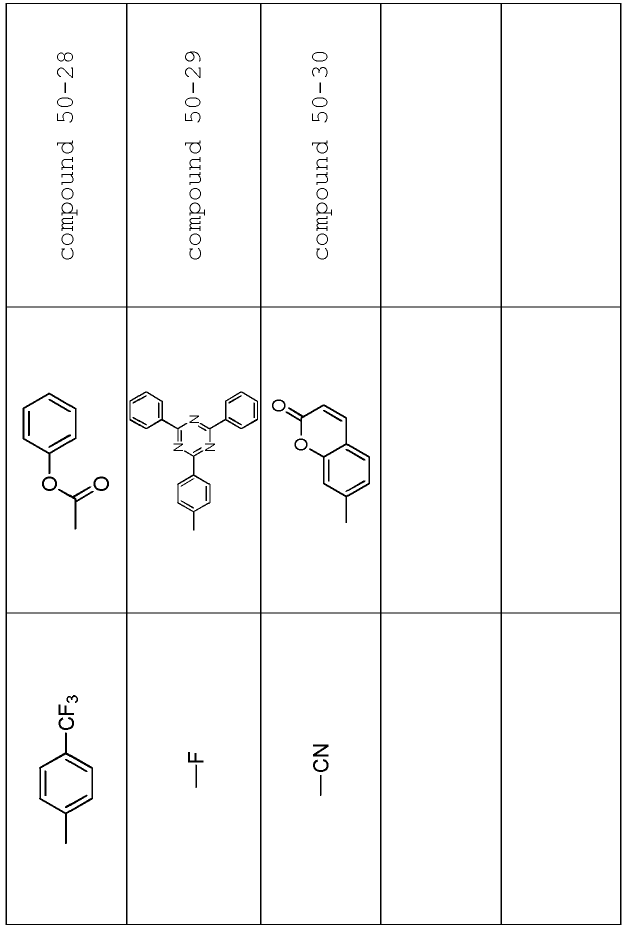
| | | | | | | | |
|---|---|---|---|---|---|---|---|
| 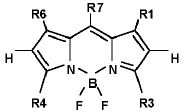 | | R7 | | | | | |
| R1, R6 | R3, R4 | 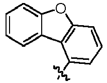 | 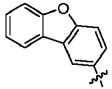 | 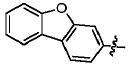 | 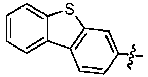 | 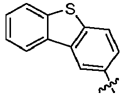 | 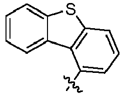 |
| 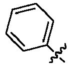 | 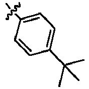 | compound 51-1 | compound 52-1 | compound 53-1 | compound 54-1 | compound 55-1 | compound 56-1 |
| | 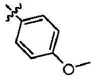 | compound 51-2 | compound 52-2 | compound 53-2 | compound 54-2 | compound 55-2 | compound 56-2 |
| | 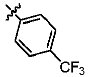 | compound 51-3 | compound 52-3 | compound 53-3 | compound 54-3 | compound 55-3 | compound 56-3 |
| | 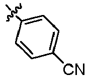 | compound 51-4 | compound 52-4 | compound 53-4 | compound 54-4 | compound 55-4 | compound 56-4 |
| 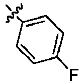 | 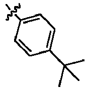 | compound 51-5 | compound 52-5 | compound 53-5 | compound 54-5 | compound 55-5 | compound 56-5 |
| | 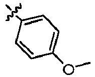 | compound 51-6 | compound 52-6 | compound 53-6 | compound 54-6 | compound 55-6 | compound 56-6 |
| | 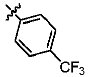 | compound 51-7 | compound 52-7 | compound 53-7 | compound 54-7 | compound 55-7 | compound 56-7 |
| | 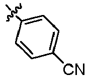 | compound 51-8 | compound 52-8 | compound 53-8 | compound 54-8 | compound 55-8 | compound 56-8 |
| 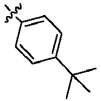 | 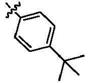 | compound 51-9 | compound 52-9 | compound 53-9 | compound 54-9 | compound 55-9 | compound 56-9 |
| | 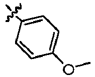 | compound 51-10 | compound 52-10 | compound 53-10 | compound 54-10 | compound 55-10 | compound 56-10 |
| | 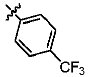 | compound 51-11 | compound 52-11 | compound 53-11 | compound 54-11 | compound 55-11 | compound 56-11 |
| | 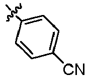 | compound 51-12 | compound 52-12 | compound 53-12 | compound 54-12 | compound 55-12 | compound 56-12 |

8. A color conversion film comprising:
a resin matrix; and
the compound represented by Chemical Formula 1 of any one of Claims 1 to 7 dispersed into the resin matrix.

9. A backlight unit comprising the color conversion film of Claim 8.

10. A display apparatus comprising the backlight unit of Claim 9.

## Patentansprüche

1. Verbindung, die durch die folgende chemische Formel 1 dargestellt wird: 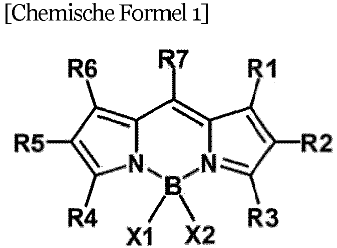 wobei in der chemischen Formel 1,
X1 und X2 gleich oder verschieden voneinander sind und jeweils unabhängig voneinander eine Halogengruppe, eine Nitrilgruppe, eine substituierte oder unsubstituierte Alkylgruppe oder eine substituierte oder unsubstituierte Alkoxygruppe sind;
R1, R3, R4 und R6 gleich oder verschieden voneinander sind und jeweils unabhängig voneinander eine Phenylgruppe, die unsubstituiert oder substituiert mit einer Nitrilgruppe ist, eine Halogengruppe, eine Arylamingruppe, einer Alkoxygruppe oder einer Alkylgruppe, die unsubstituiert oder mit einer Halogengruppe substituiert ist; eine Pyridylgruppe, die unsubstituiert oder mit einer Alkylgruppe substituiert ist; oder eine Dibenzofuranylgruppe sind;
R2 und R5 gleich oder verschieden voneinander sind und jeweils unabhängig voneinander Wasserstoff, eine Fluorgruppe, eine Nitrilgruppe, eine Methylestergruppe, eine Phenylestergruppe, eine Methylsulfoxygruppe, eine Methylgruppe, die mit einer mit einer Nitrogruppe substituierten Phenylgruppe substituiert ist; eine Ethylgruppe, eine n-Propylgruppe, eine Cumaringruppe, eine Phenylgruppe, die unsubstituiert oder mit einer Fluorgruppe, einer Trifluormethylgruppe, einer Phenylgruppe, einer Biphenylgruppe oder einer mit einer Phenylgruppe substituierten Triazinylgruppe substituiert ist; eine mit einer Phenylgruppe substituierte Biphenylgruppe; eine Terphenylgruppe; eine Pyrimidylgruppe; eine Furanylgruppe; eine Naphthylgruppe; eine Chinolylgruppe; eine Benzothiadiazolylgruppe; eine Phenanthrenylgruppe; eine Pyrenylgruppe; eine Triphenylenylgruppe; eine Spirobifluorenylgruppe; oder eine Fluoranthenylgruppe sind;
R7 eine Gruppe ist, die durch die folgende chemische Formel 2 dargestellt wird; 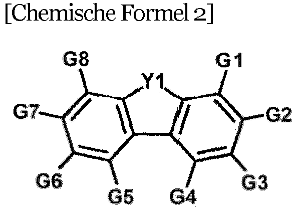
wobei in der chemischen Formel 2,
Y1O oder S ist;
eine jede der Gruppen G1 bis G8 eine Stelle ist, die an die chemische Formel 1 bindet, und die übrigen gleich oder verschieden voneinander sind und jeweils unabhängig voneinander Wasserstoff oder benachbarte Gruppen sind, die aneinander gebunden sind, um einen mit R' substituierten Ring zu bilden,
wobei wenn benachbarte Gruppen unter G1 bis G8 aneinander binden, um einen mit R' substituierten Ring zu bilden, eine beliebige der Gruppen G1 bis G8, die nicht den Ring mittels der benachbarten Gruppe n, die aneinander binden, bildet, und R' eine Stelle sind, die an die chemische Formel 1 bindet, und der Rest von R' Wasserstoff ist.

2. Verbindung nach Anspruch 1, bei der die chemische Formel 2 durch eine der folgenden chemischen Formeln 2-1 bis 2-3 dargestellt wird: 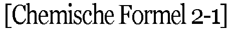 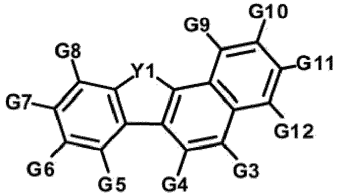 wobei in der chemischen Formel 2-1,
Y1 die gleiche Definition wie in der chemischen Formel 2 aufweist;
eine beliebige von G3 bis G12 eine Stelle ist, die an die chemische Formel 1 bindet, und die übrigen Wasserstoff sind; 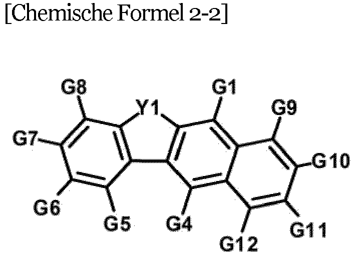
wobei in der chemischen Formel 2-2,
Y1 die gleiche Definition wie in der chemischen Formel 2 aufweist;
eine beliebige von G1 und G4 bis G12 eine Stelle ist, die an die chemische Formel 1 bindet, und die übrigen Wasserstoff sind; 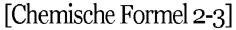 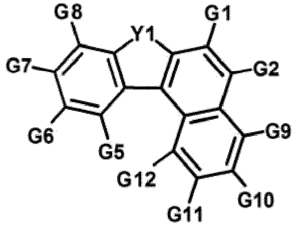
wobei in der chemischen Formel 2-3,
Y1 die gleiche Definition wie in der chemischen Formel 2 aufweist; und
eine beliebige von G1, G2 und G5 bis G12 eine Stelle ist, die an die chemische Formel 1 bindet, und die übrigen Wasserstoff sind.

3. Verbindung nach Anspruch 1, bei der die chemische Formel 1 durch eine der folgenden chemischen Formeln 1-1 bis 1-4 dargestellt wird: 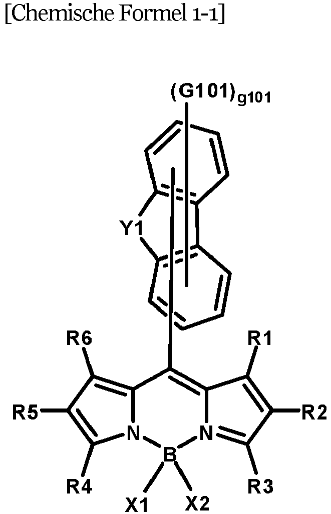 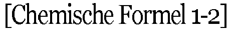 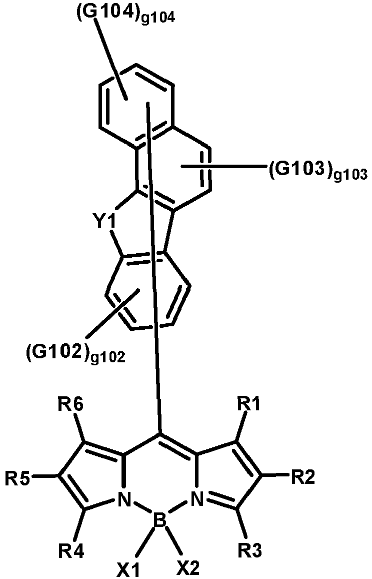 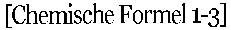 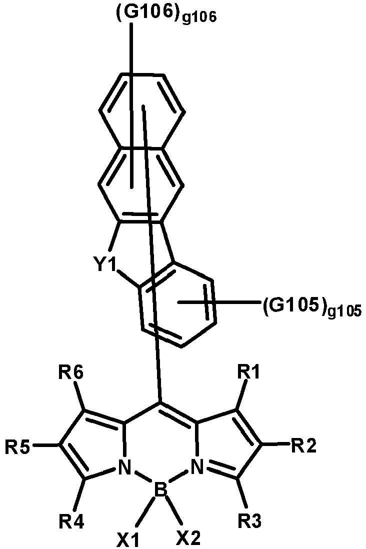 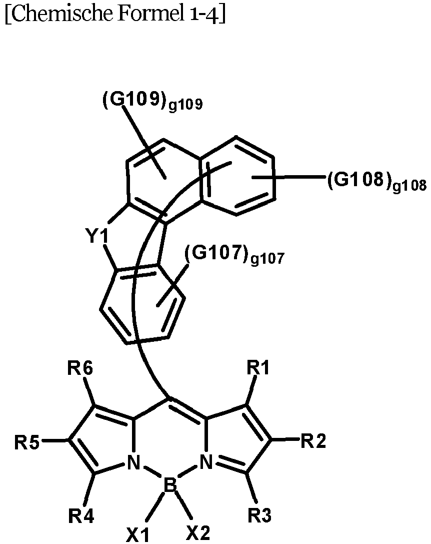 wobei in den chemischen Formeln 1-1 bis 1-4,
R1 bis R6 sowie X1 und X2 die gleichen Definitionen wie in der chemischen Formel 1 aufweisen; Y1 die gleiche Definition wie in Chemische Formel 2 aufweist;
G101 bis G109 Wasserstoff sind;
g101 eine ganze Zahl von 1 bis 7 ist;
g102, g104, g105, g107 und g108 jeweils eine ganze Zahl von 1 bis 4 sind;
g103 und g109 jeweils 1 oder 2 sind;
g106 eine ganze Zahl von 1 bis 6 ist;
3 ≤ g102 + g103 + g104 ≤ 9 gilt;
2 ≤ g105 + g106 ≤ 9 gilt;
3 ≤ g107 + g108 + g109 ≤ 9 gilt und
wenn g101 bis g109 jeweils ein Vielfaches sind, die Strukturen in den Klammern gleich oder verschieden voneinander sind.

4. Verbindung nach Anspruch 1, die einen maximalen Lichtemissionspeak aufweist, der in einem Filmzustand bei 610 nm bis 660 nm vorliegt.

5. Verbindung nach Anspruch 1, die einen maximalen Lichtemissionspeak aufweist, der in einem Filmzustand bei 610 nm bis 660 nm vorliegt, wobei der Lichtemissionspeak eine Halbwertbreite von 60 nm oder weniger aufweist.

6. Verbindung aus Anspruch 1, die eine Quanteneffizienz von 0,76 oder mehr aufweist.

7. Verbindung nach Anspruch 1, bei der die chemische Formel 1 aus den folgenden Verbindungen ausgewählt ist: 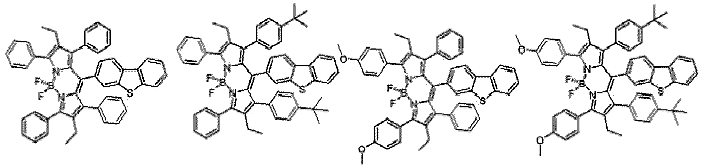 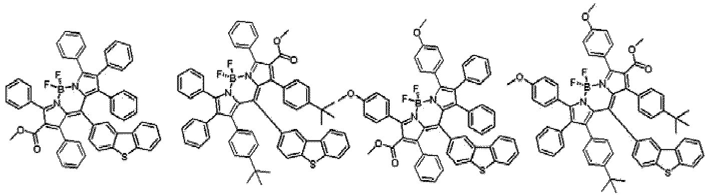 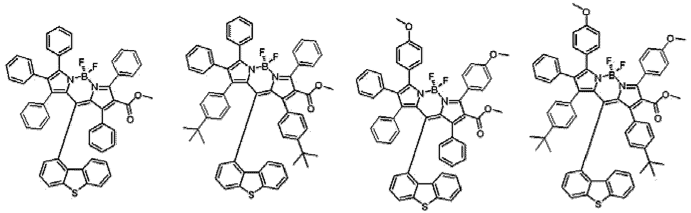 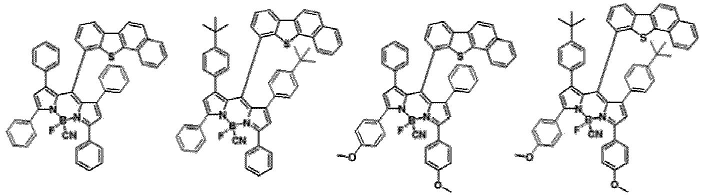 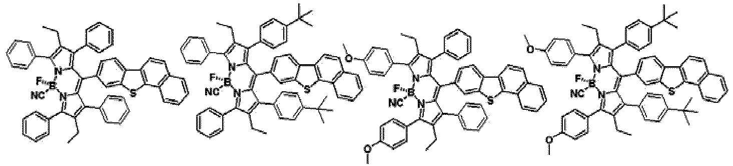 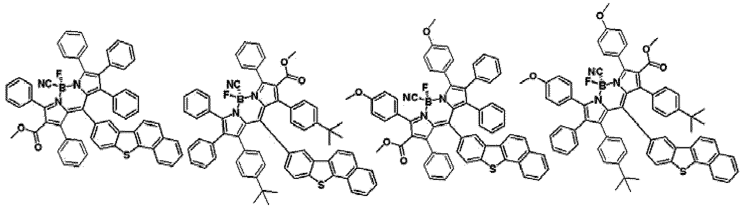 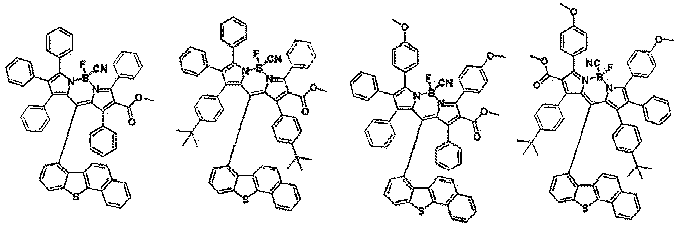 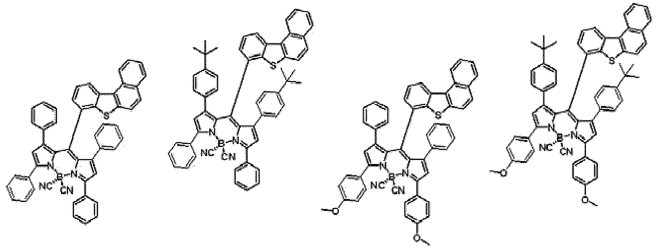 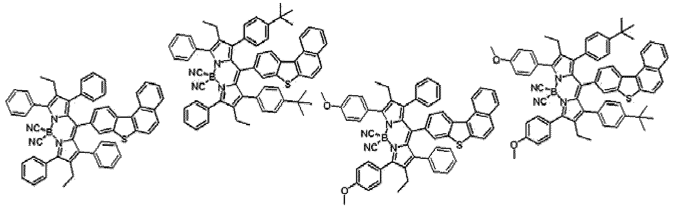 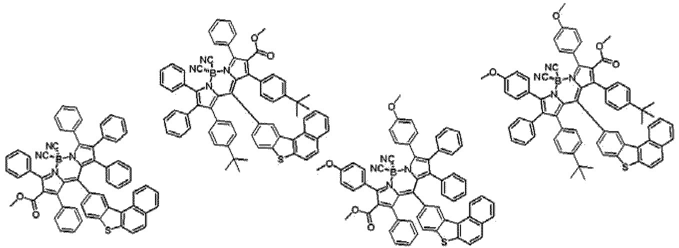 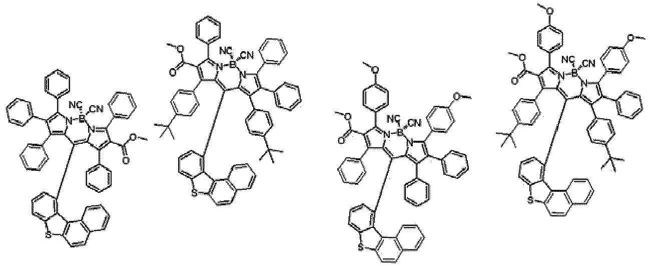 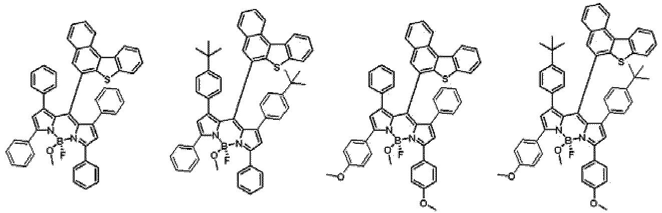 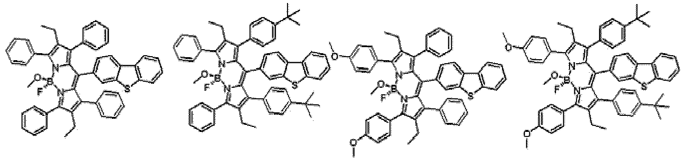 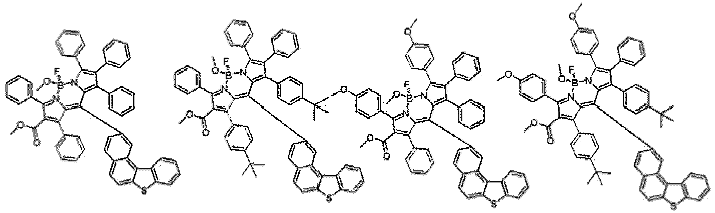 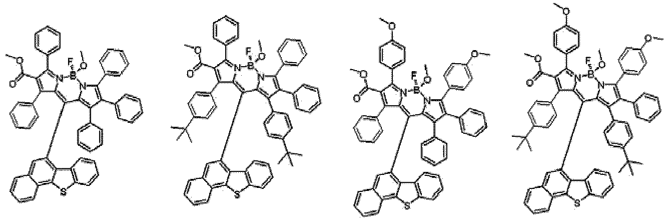 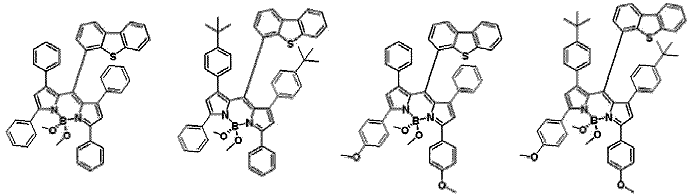 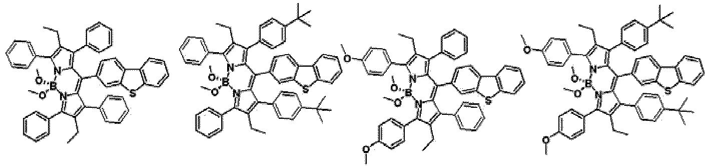 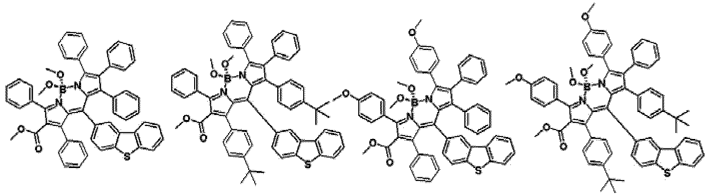 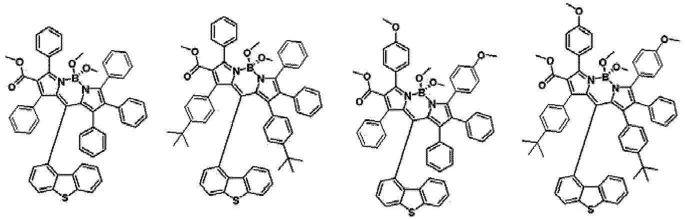 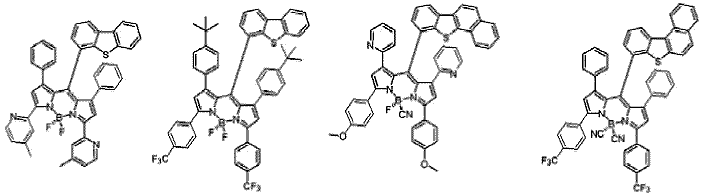 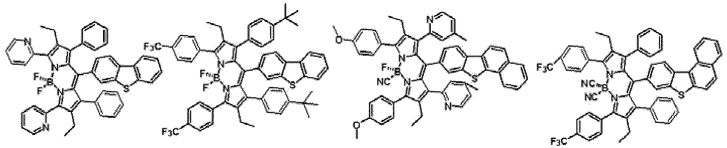 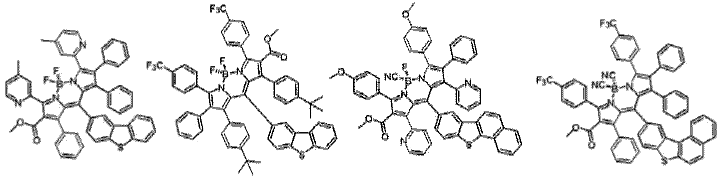 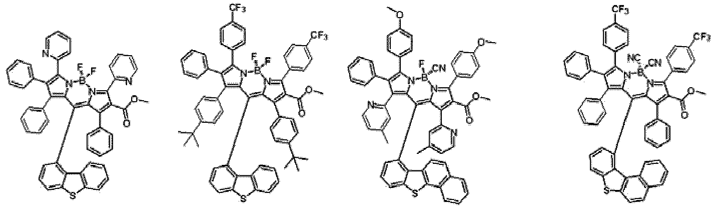 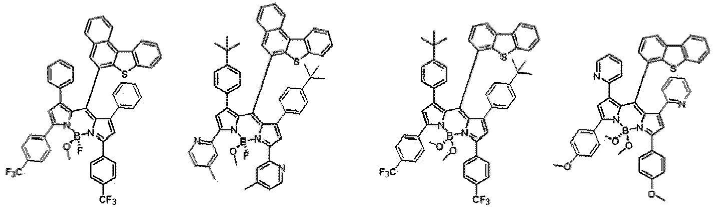 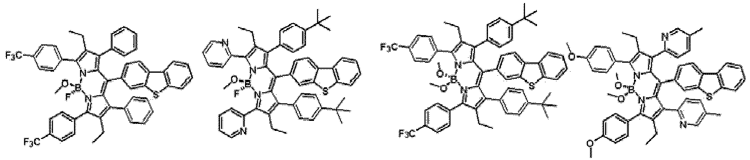 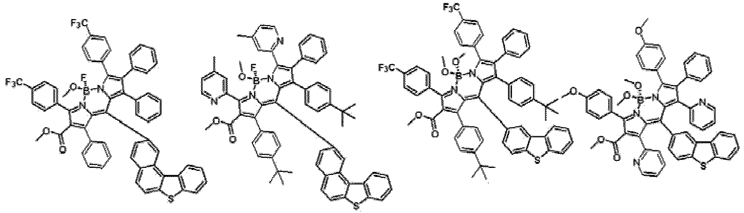 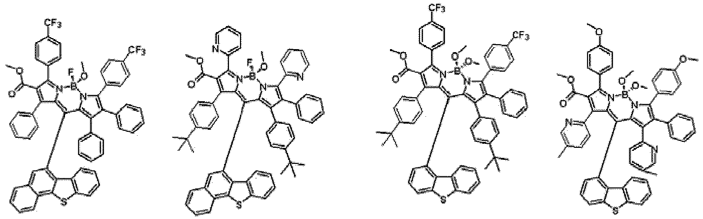 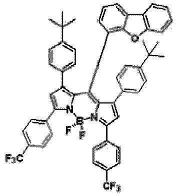 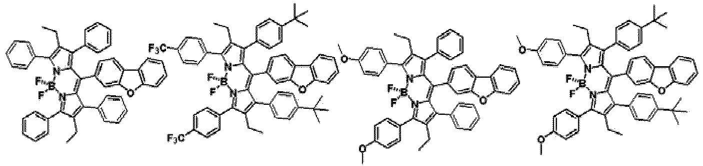 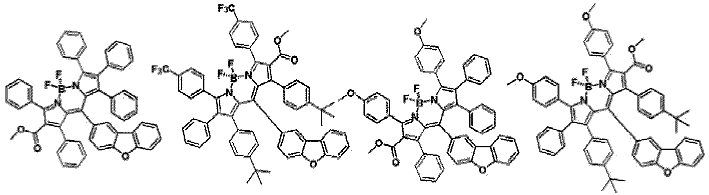 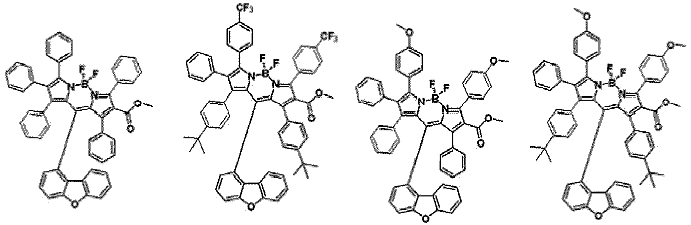 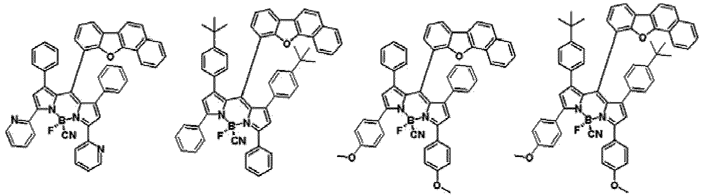 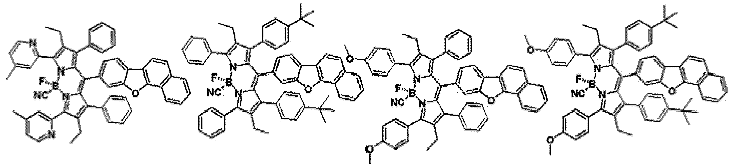 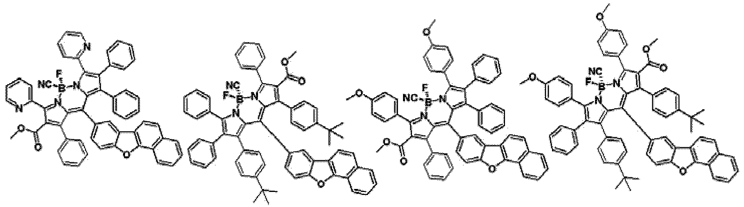 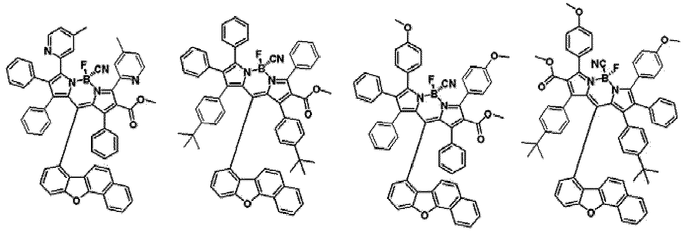 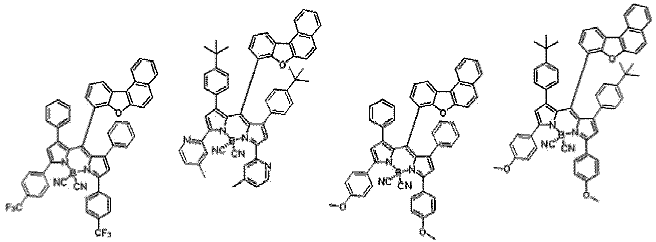 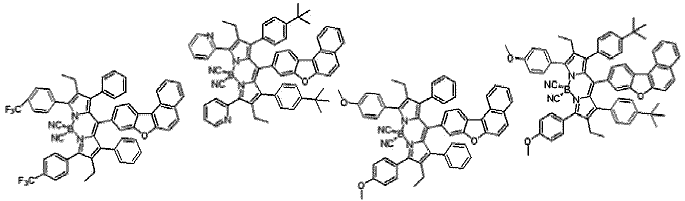 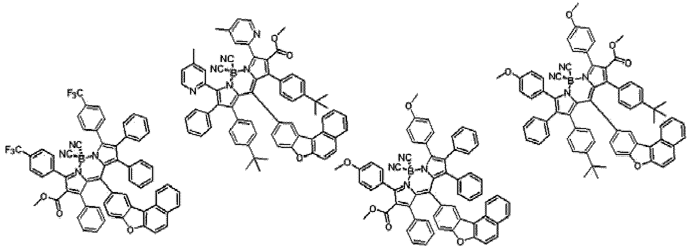 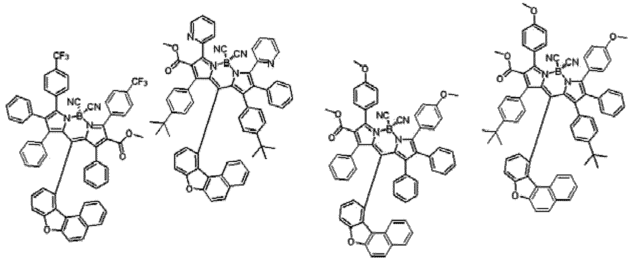 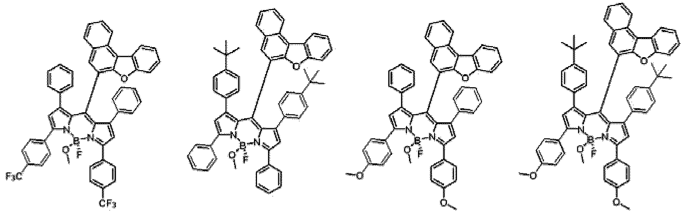 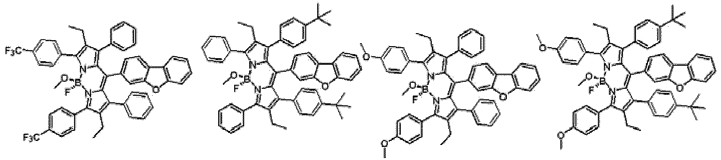 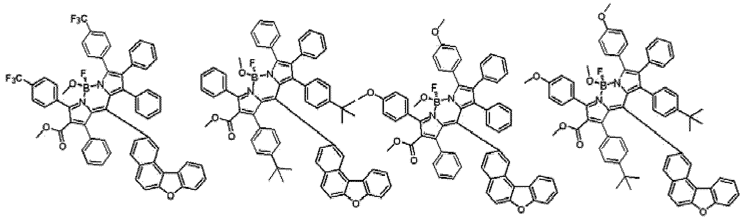 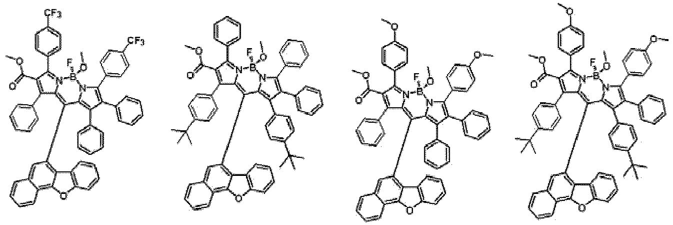 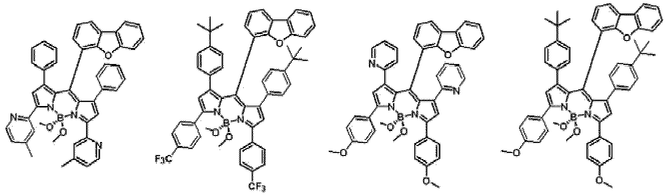 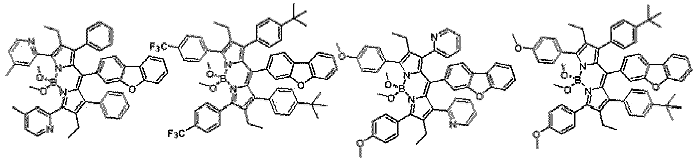 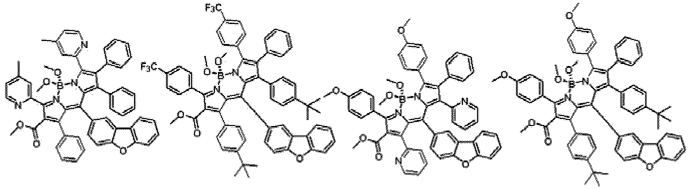 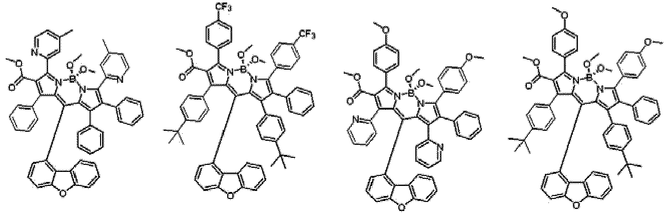 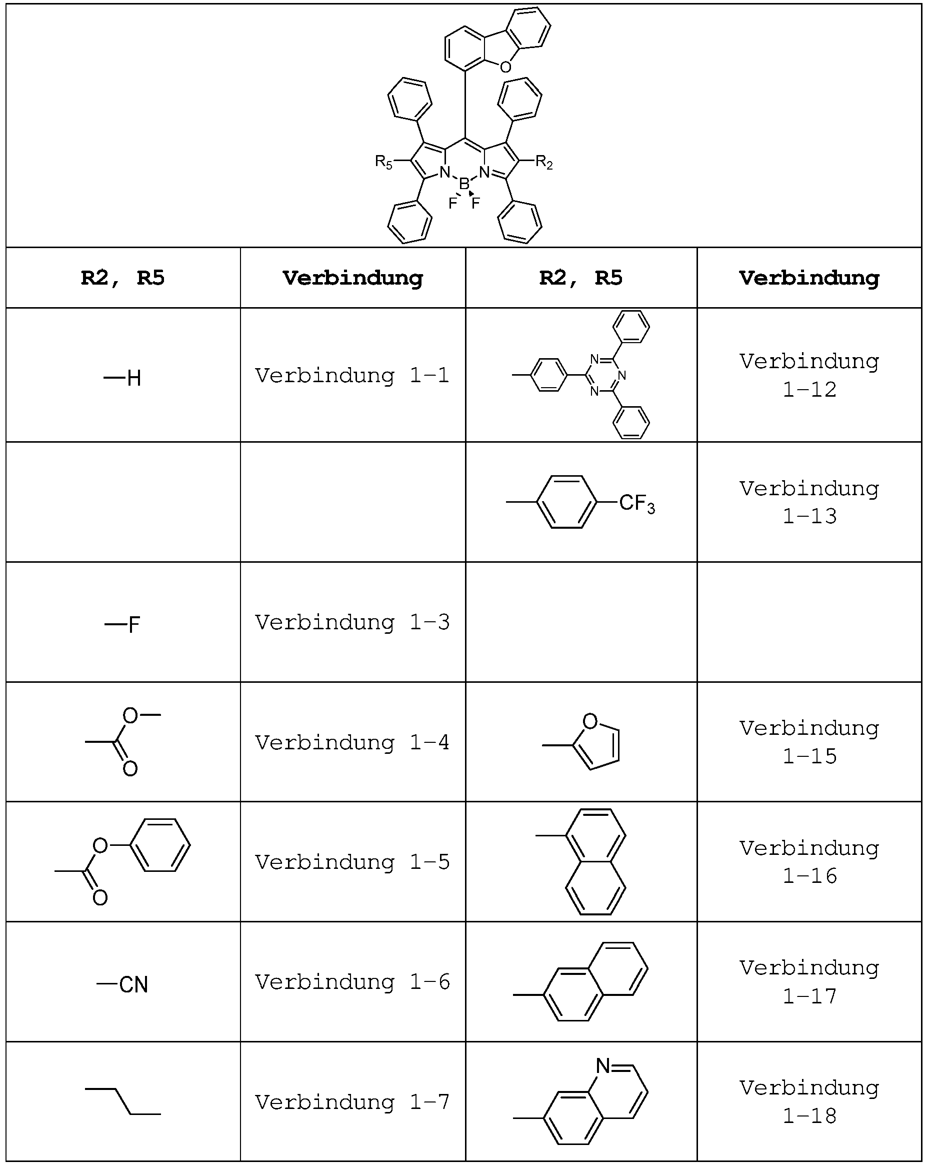 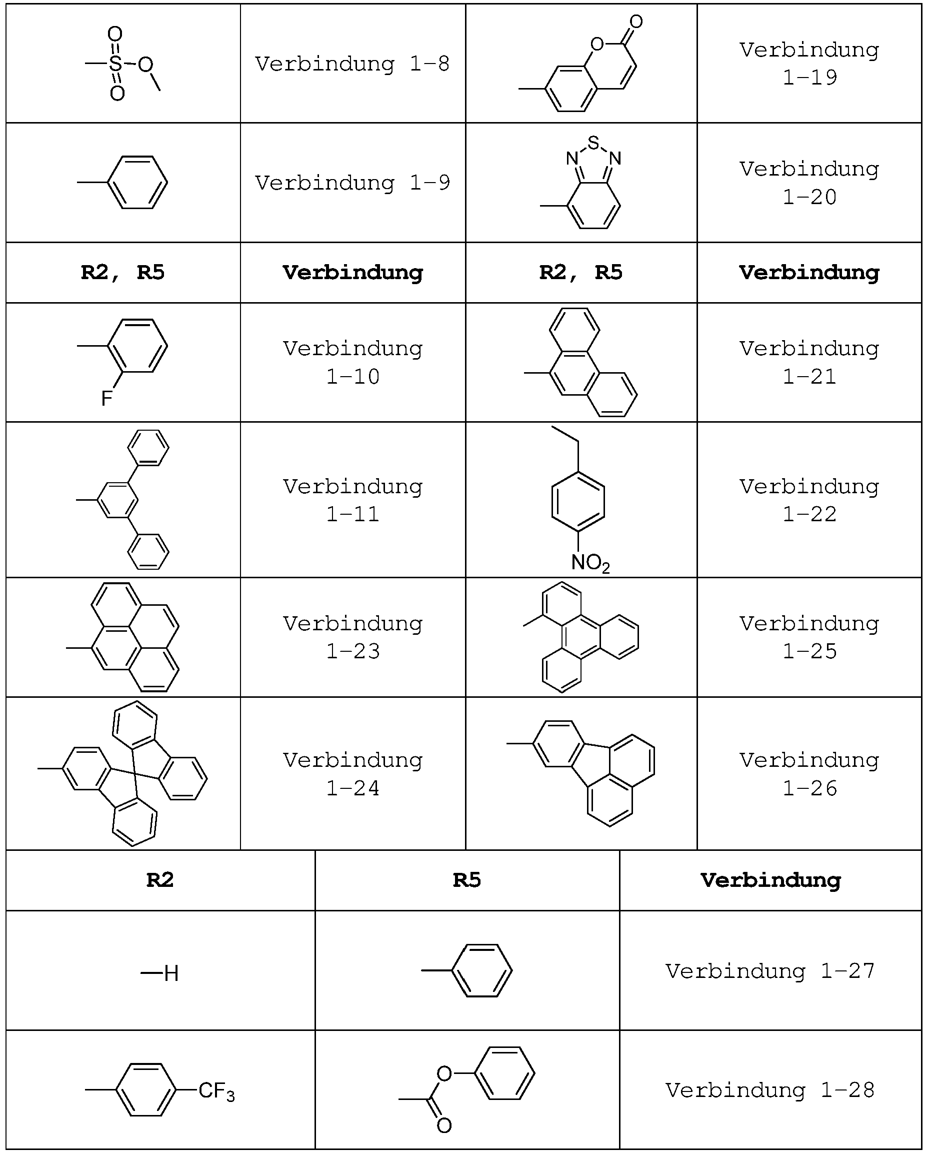 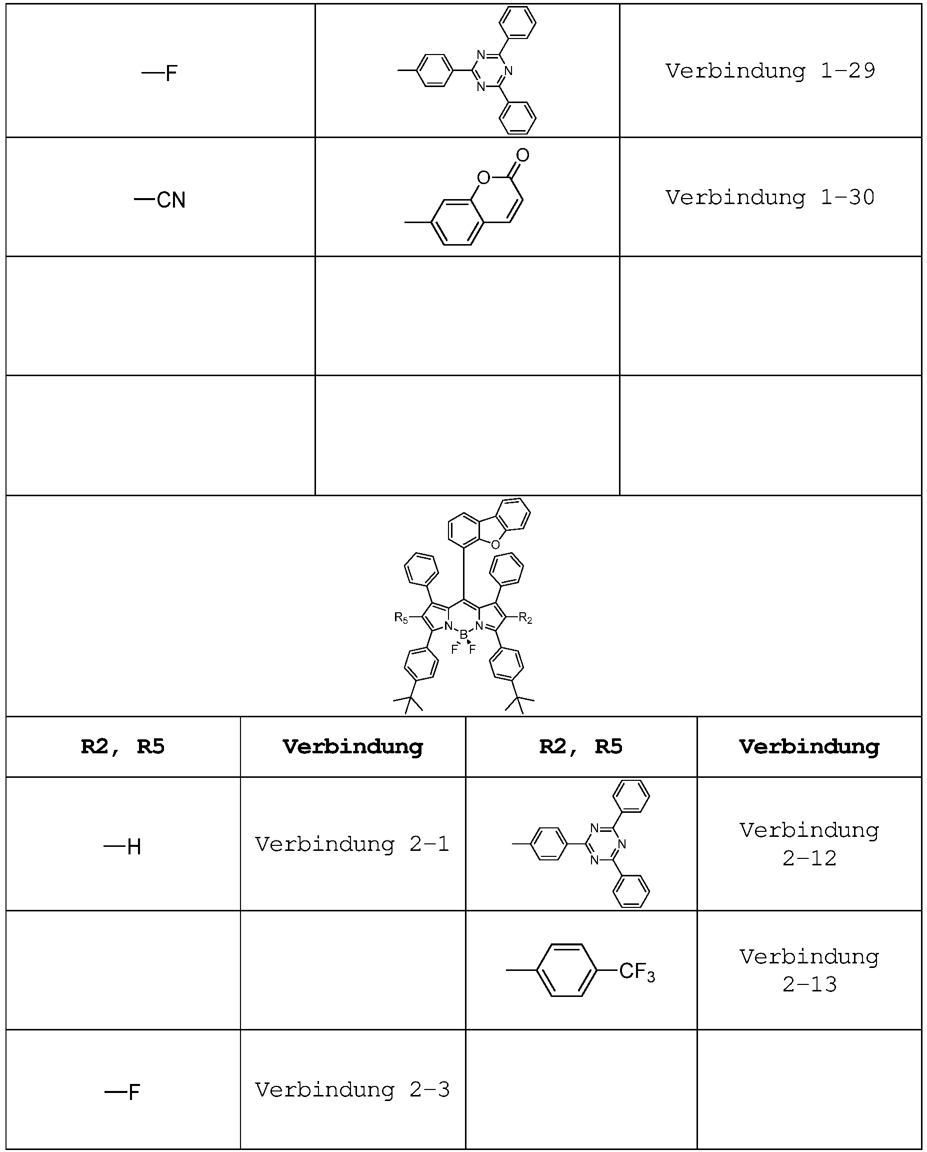 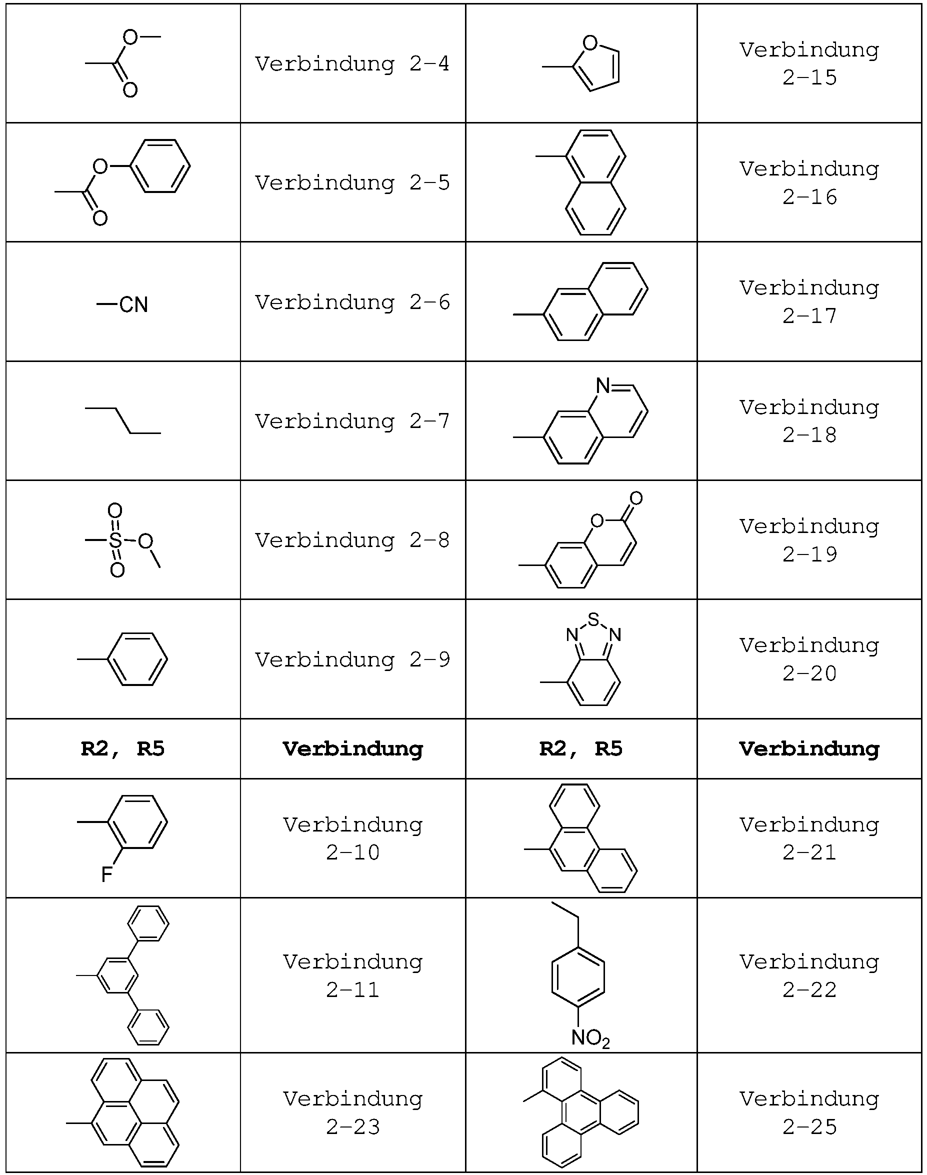 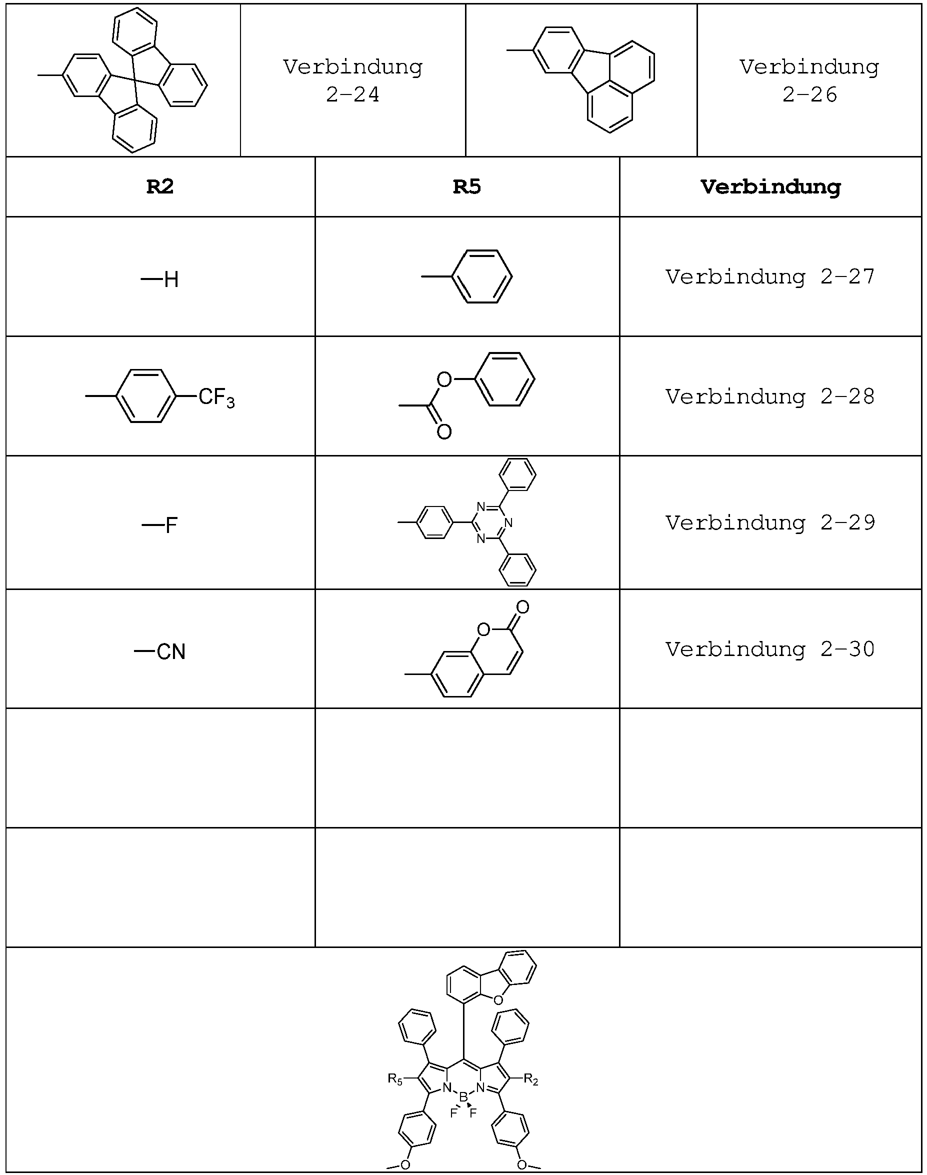 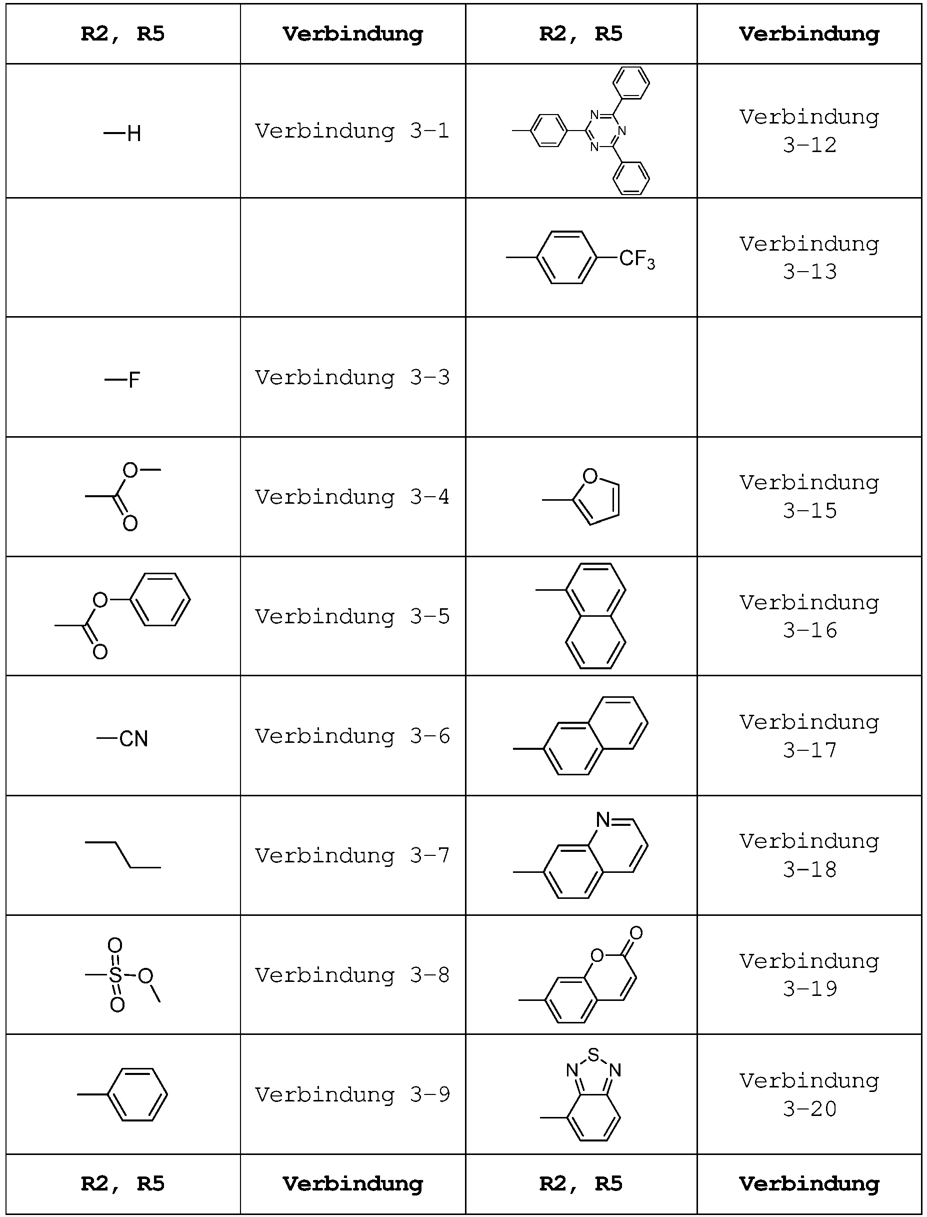 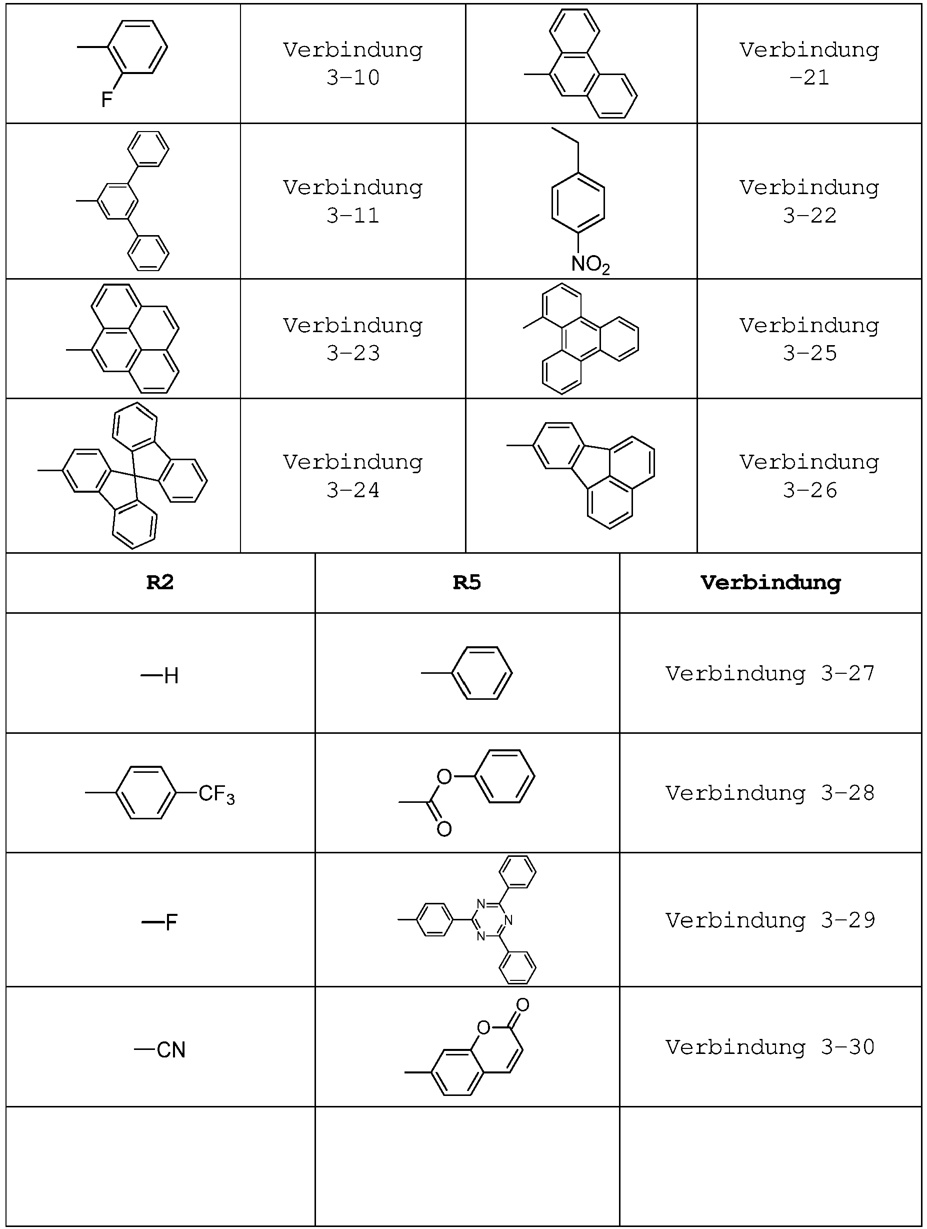 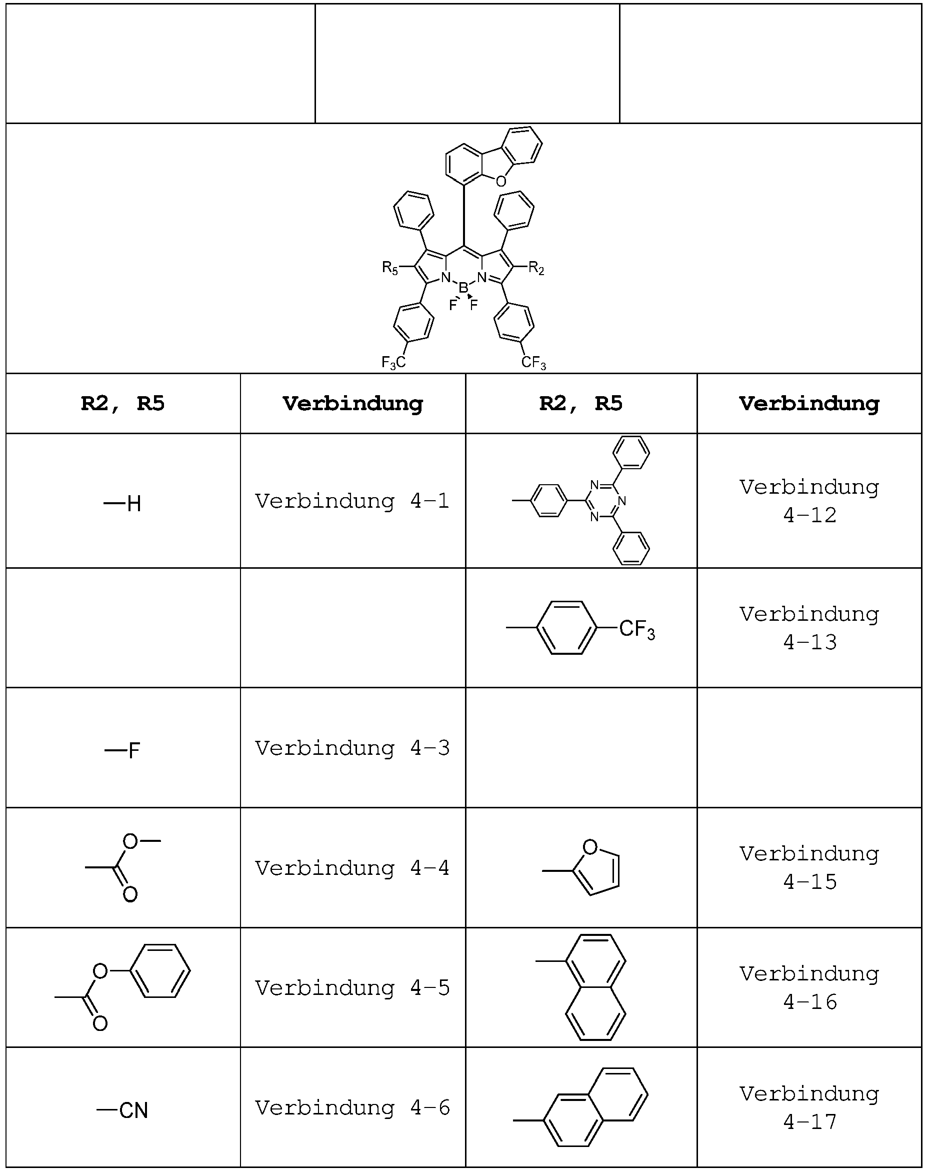 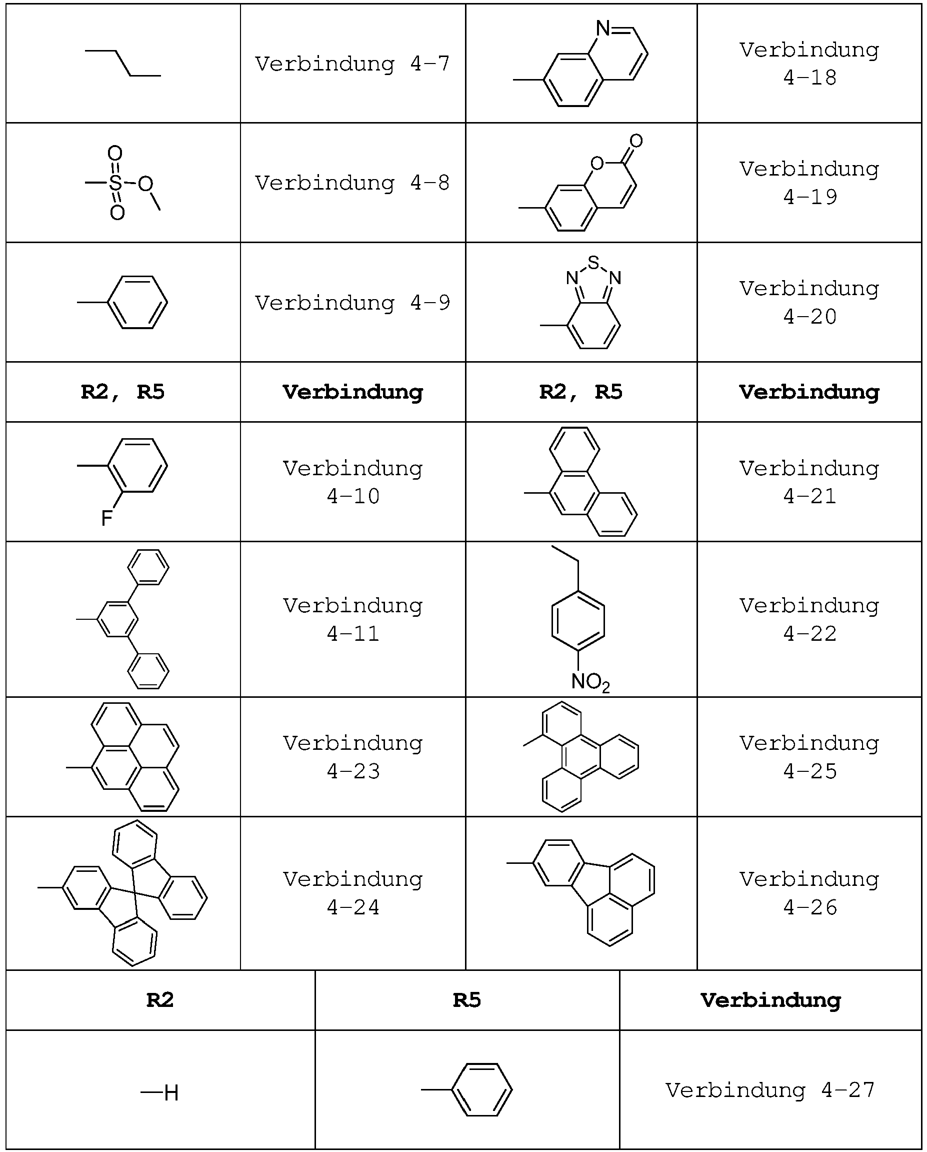 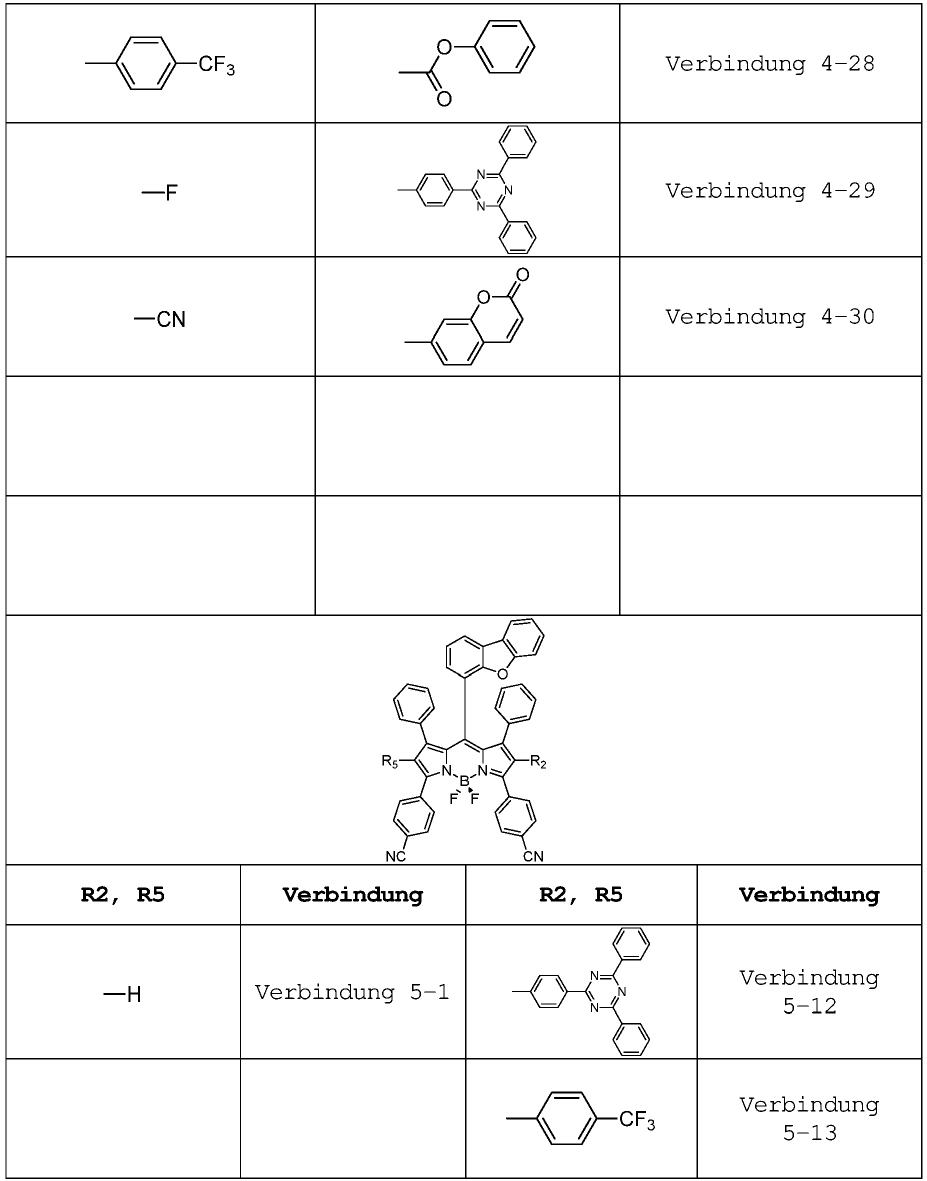 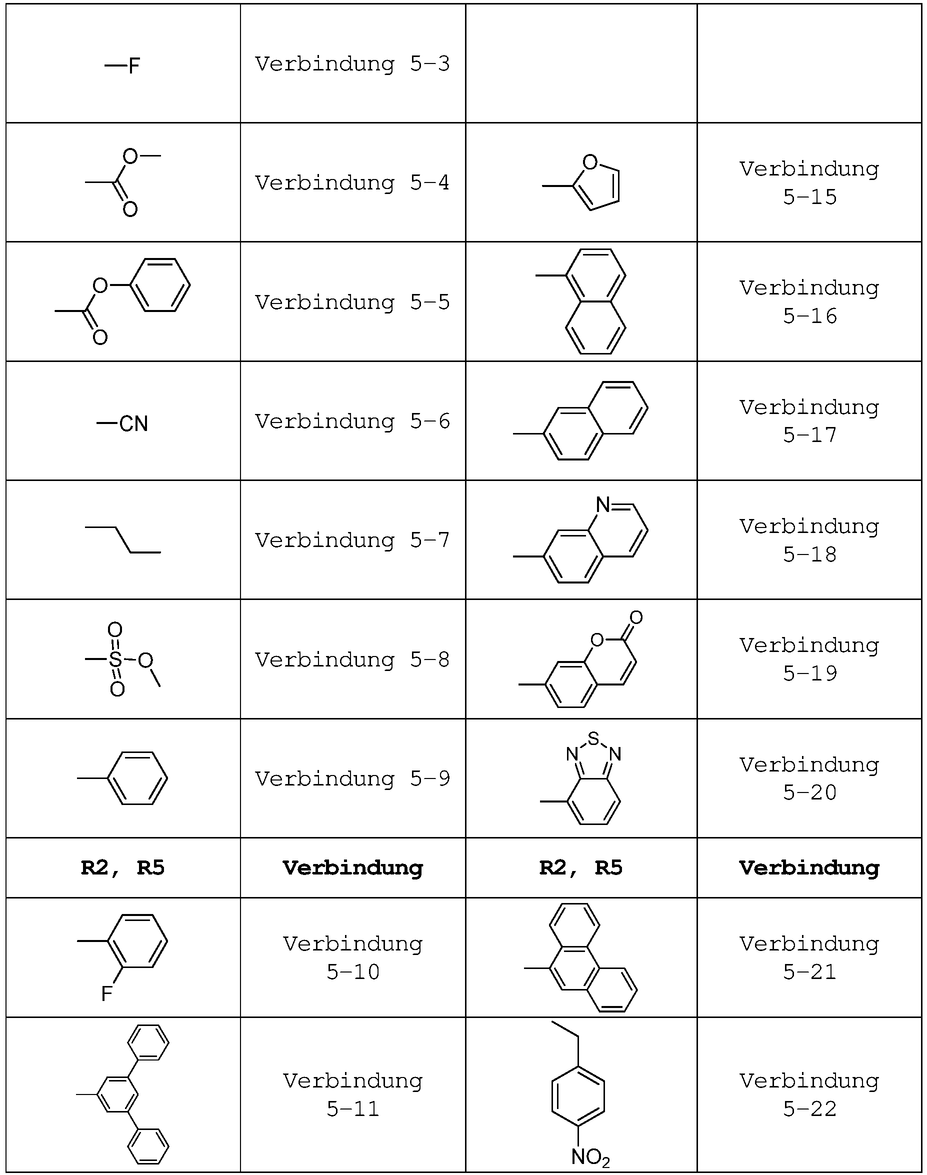 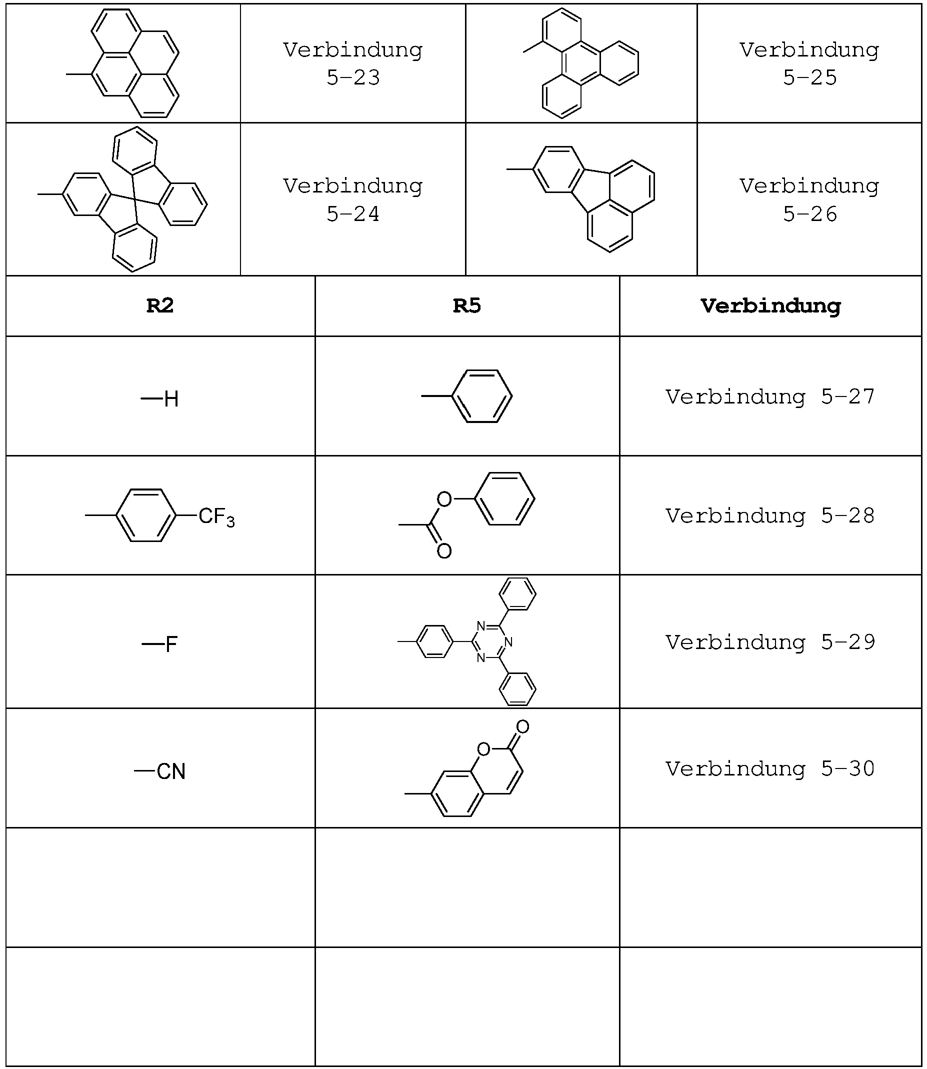 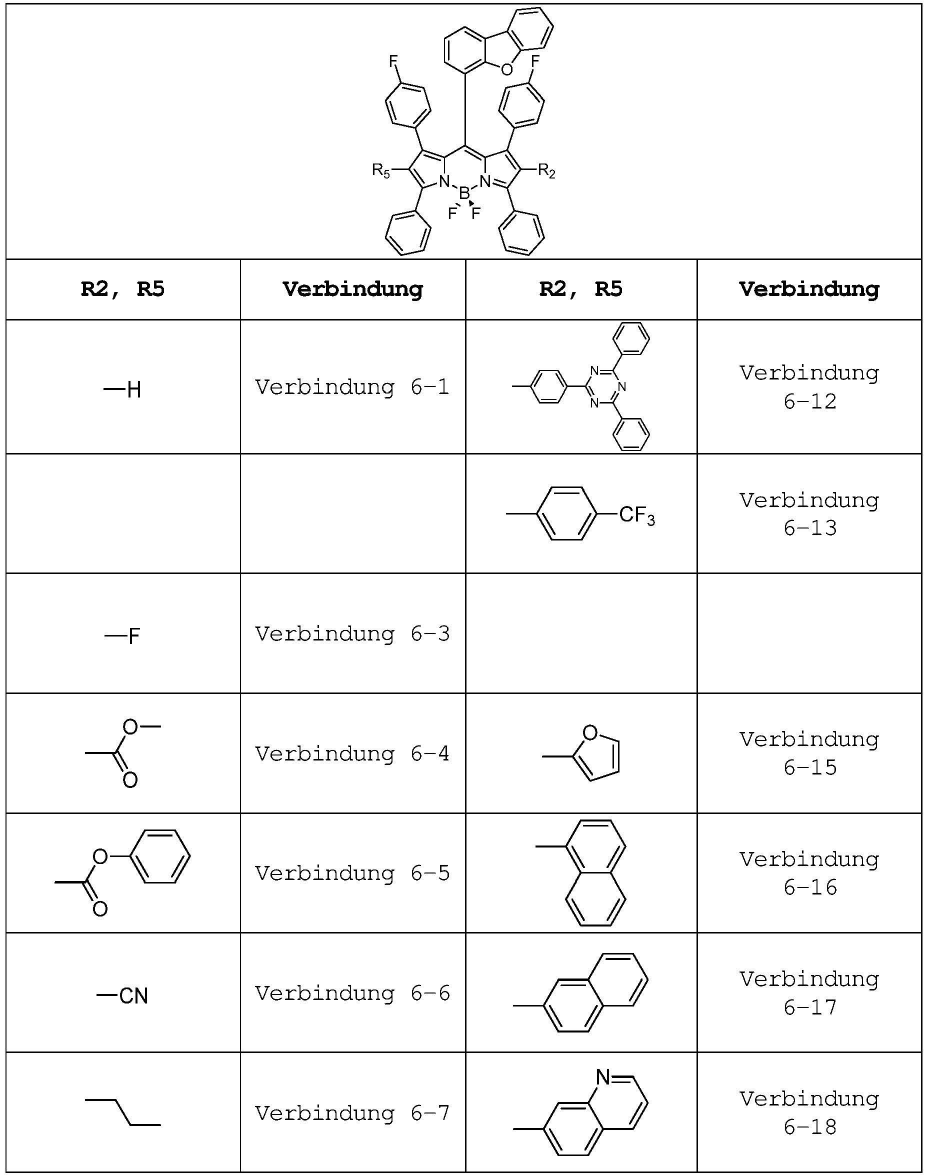 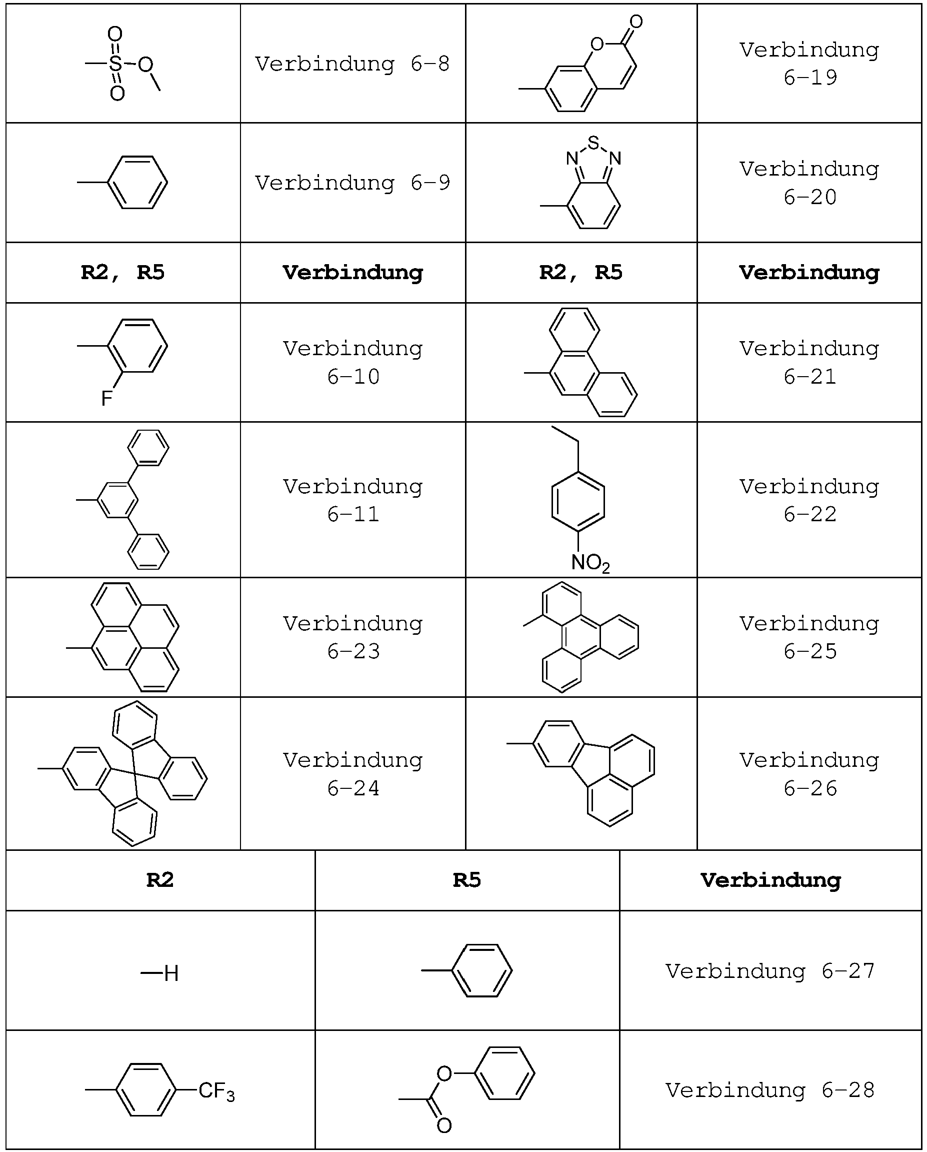 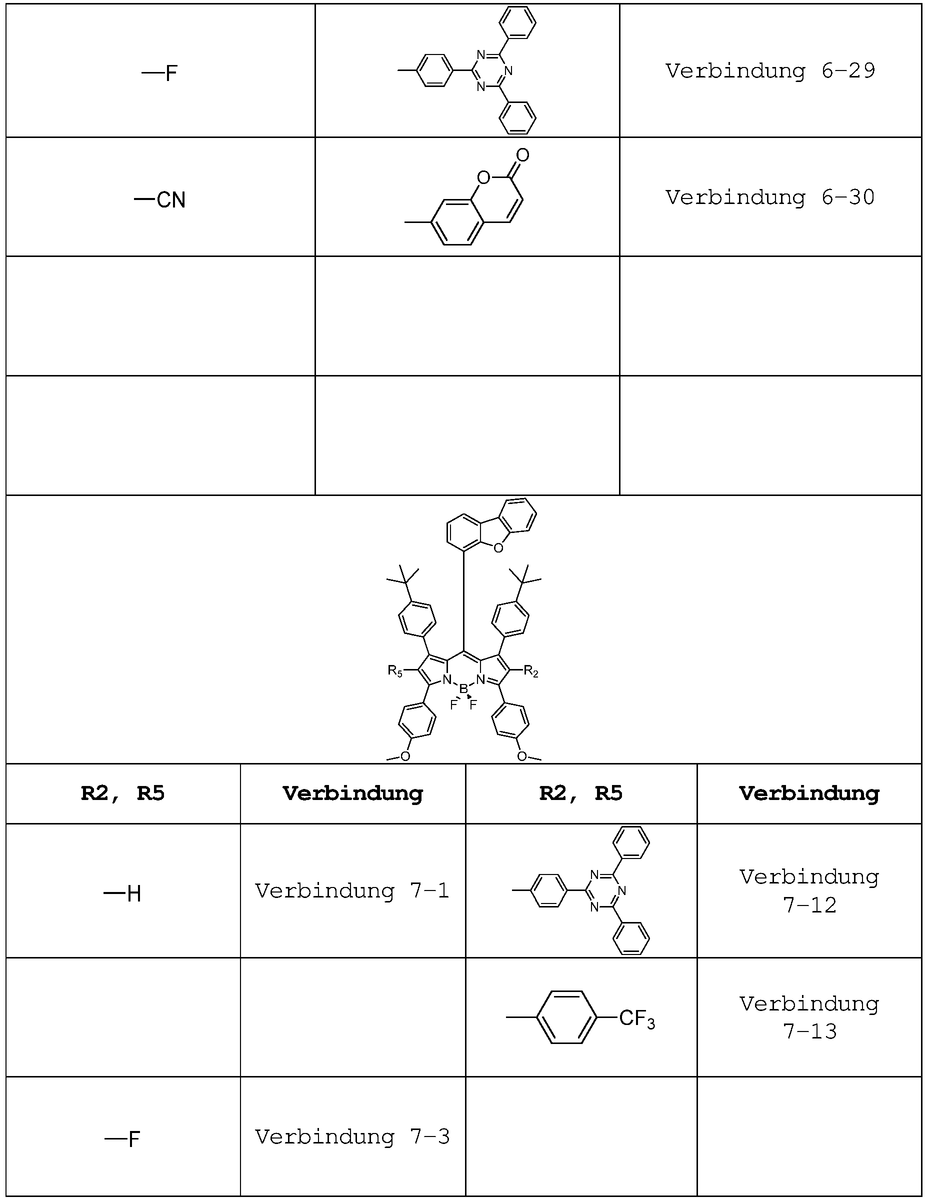 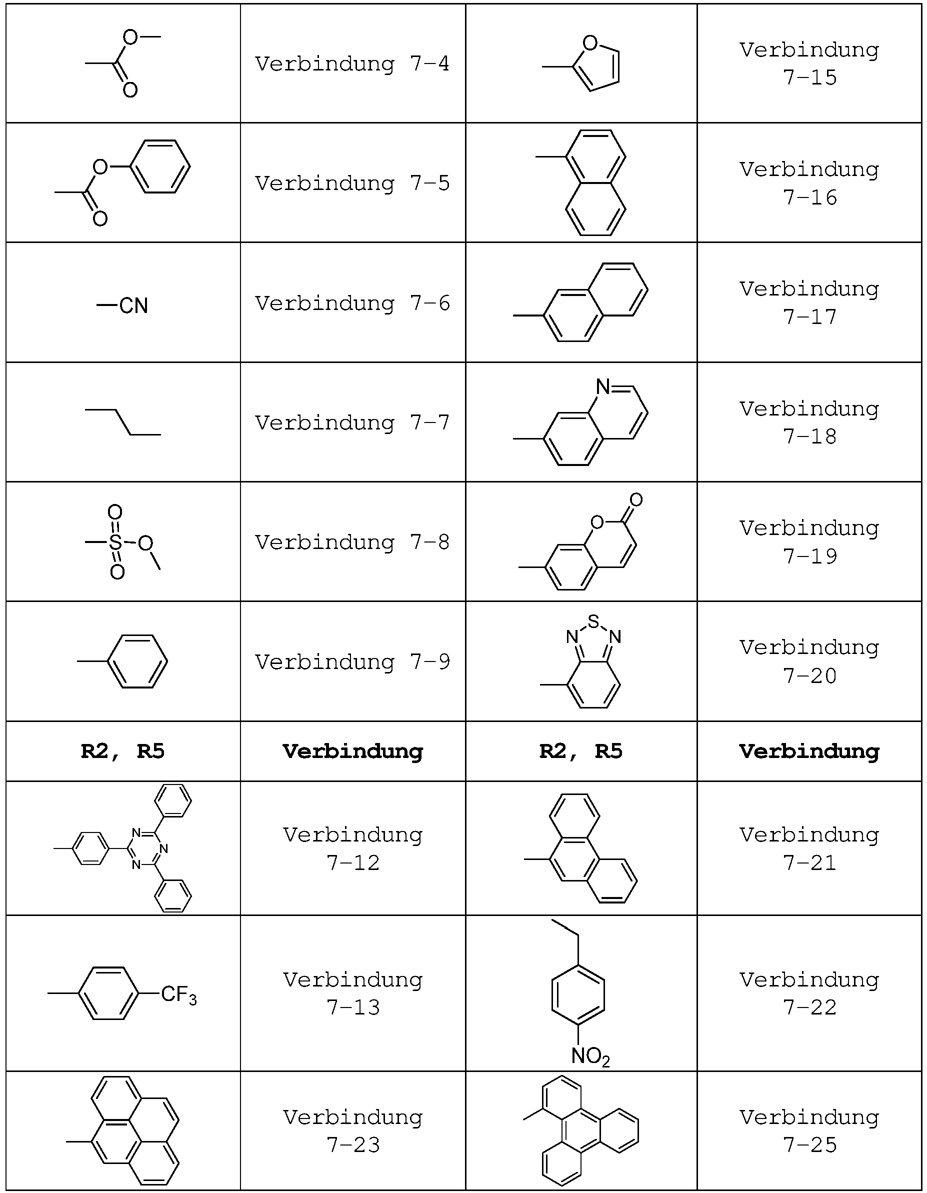 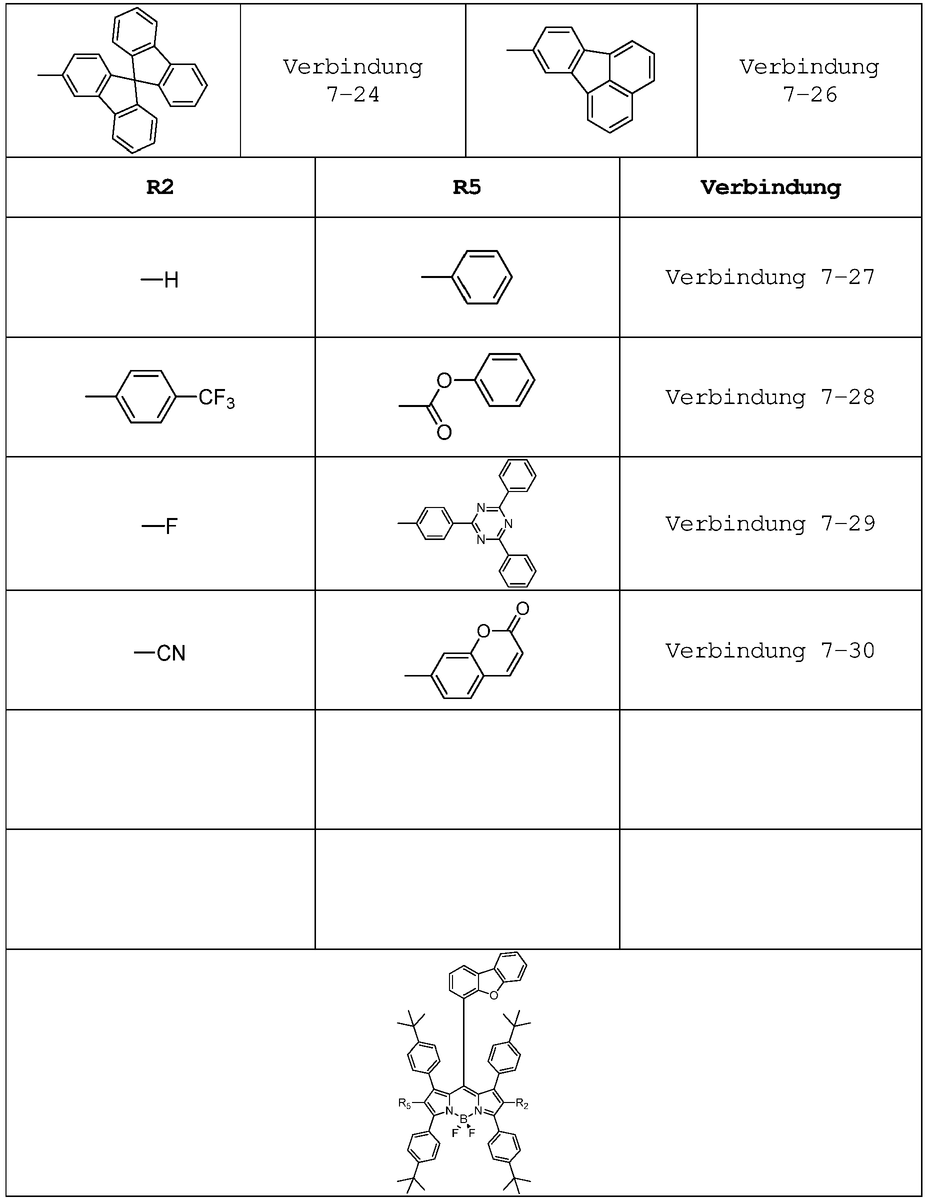 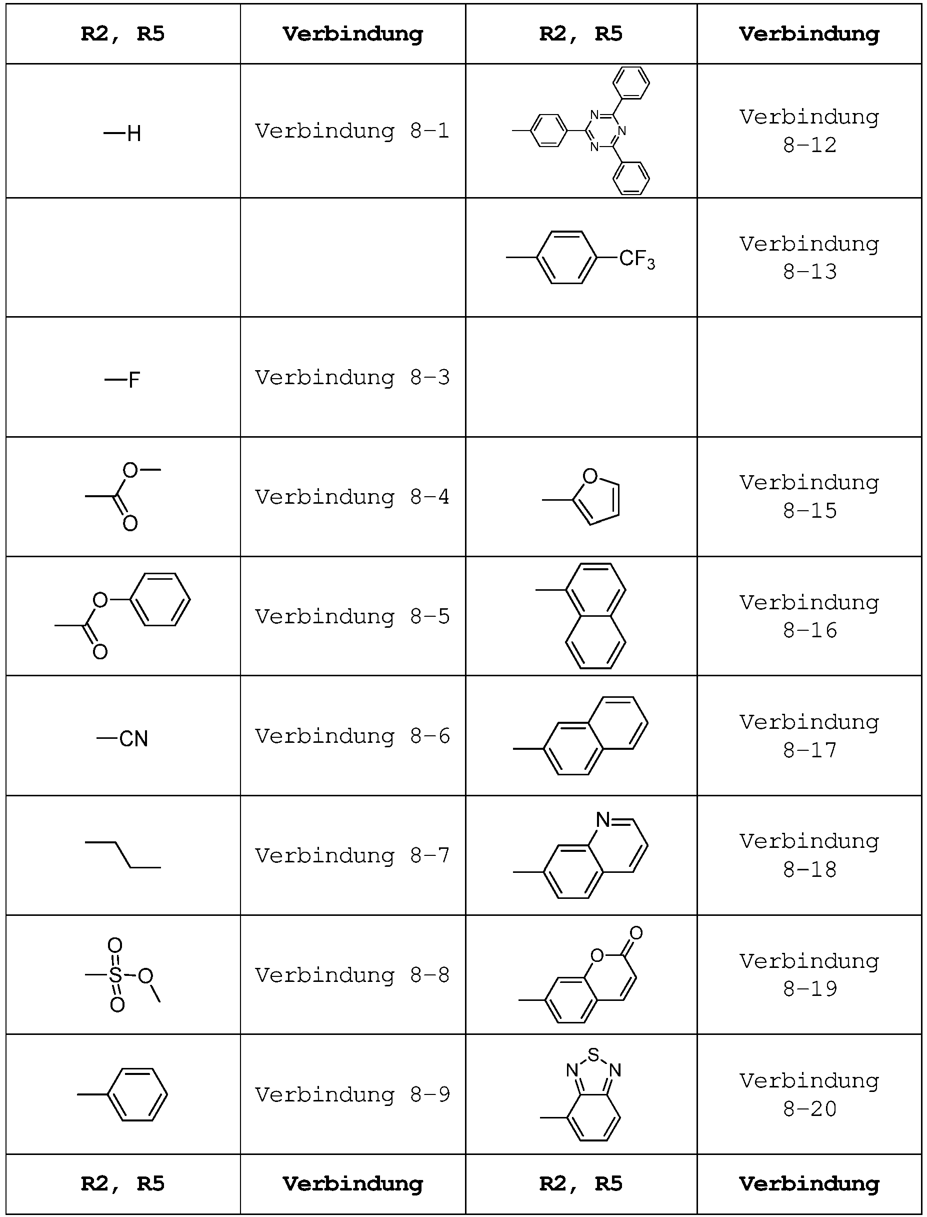 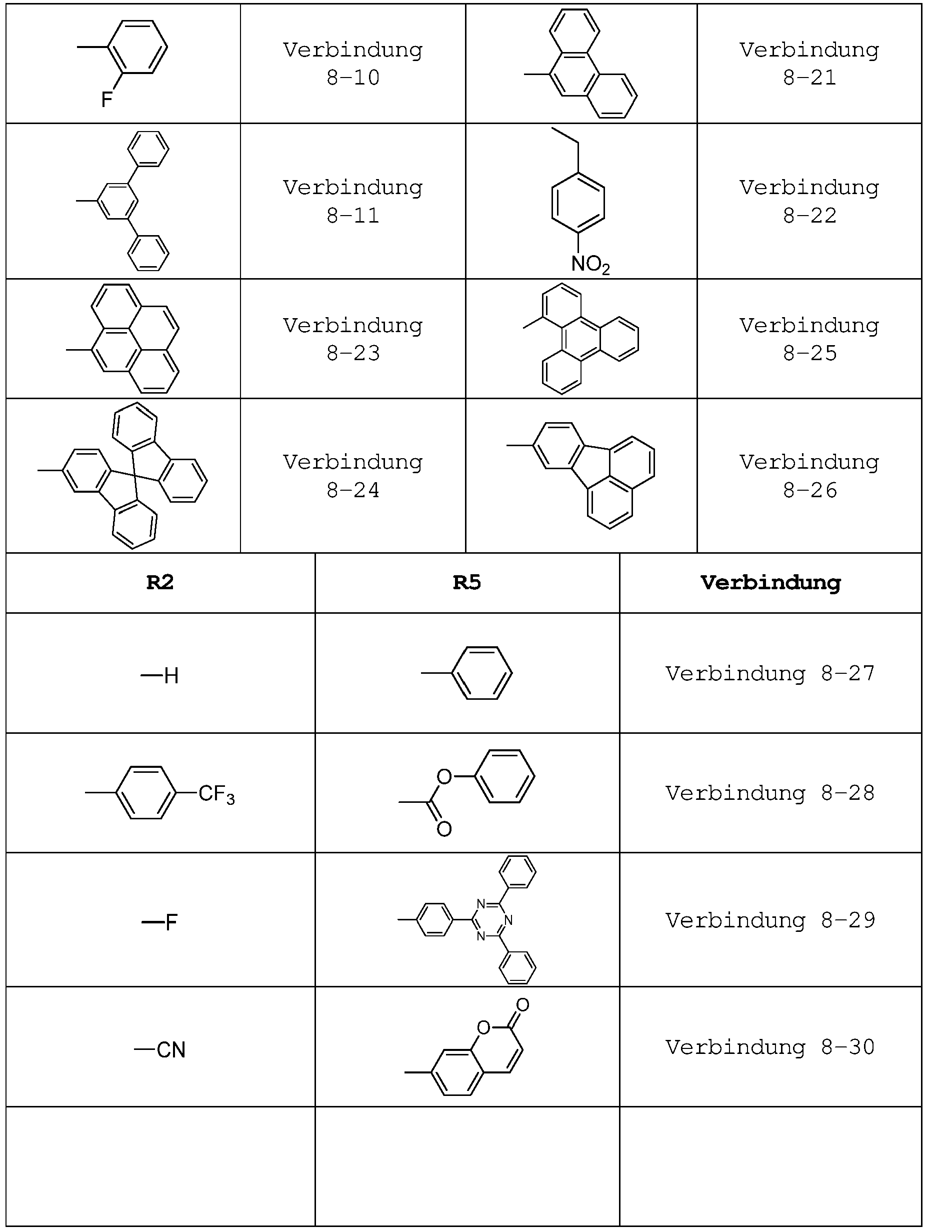 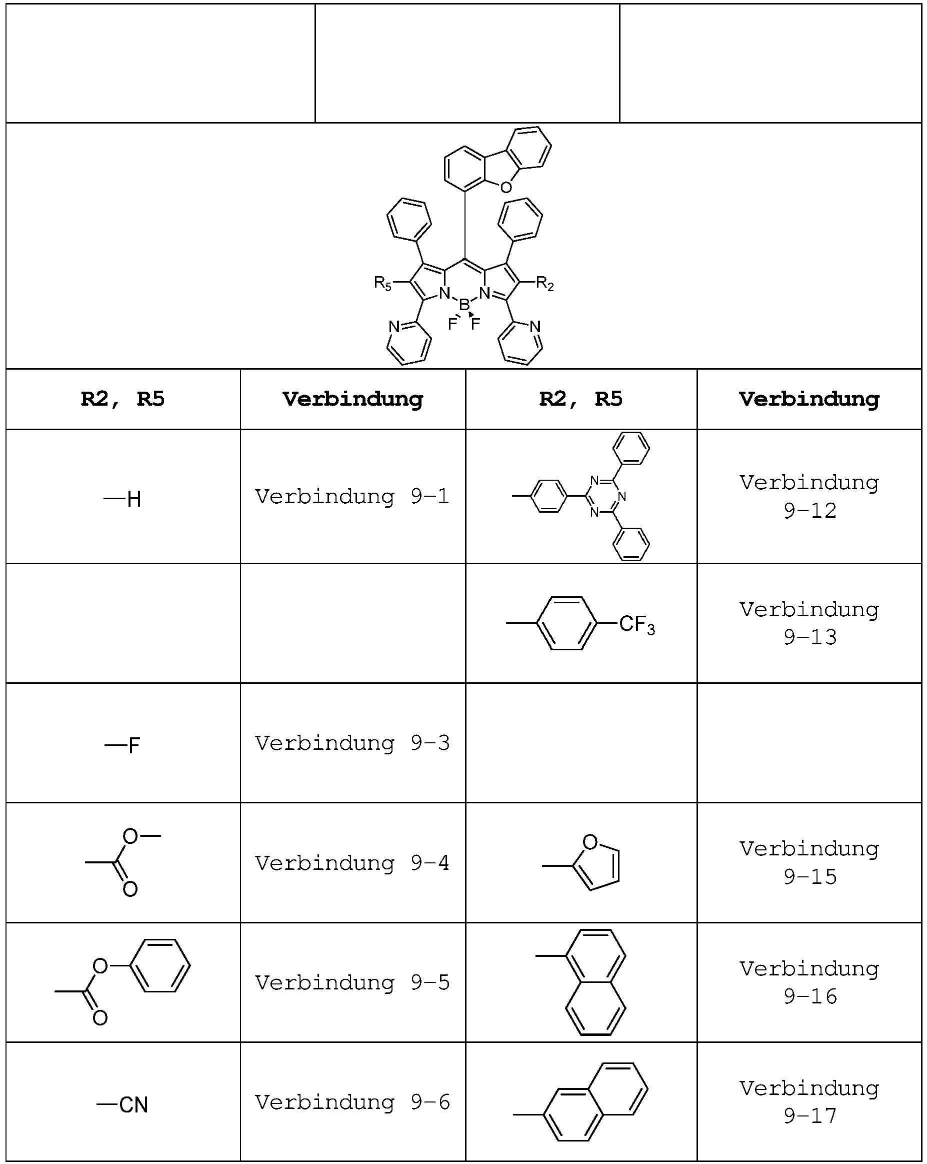 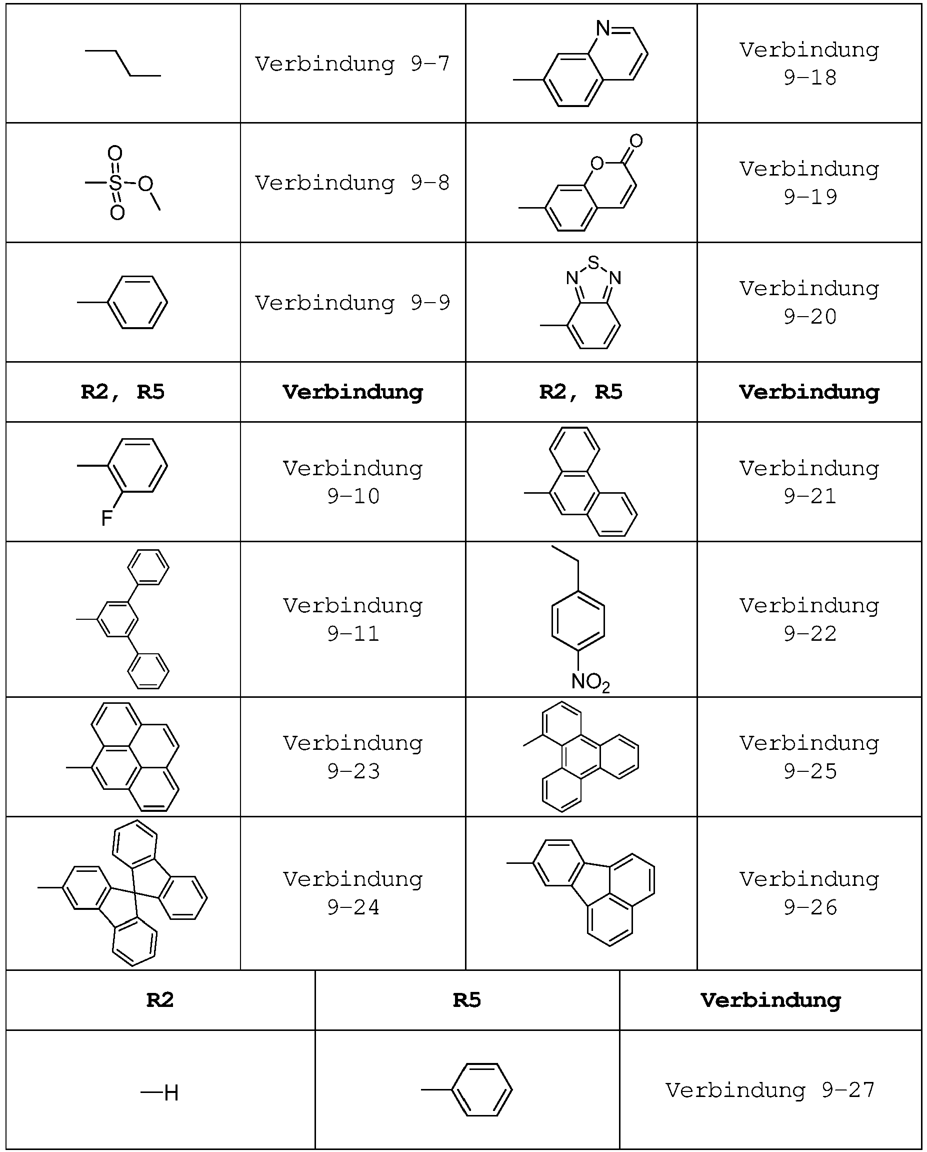 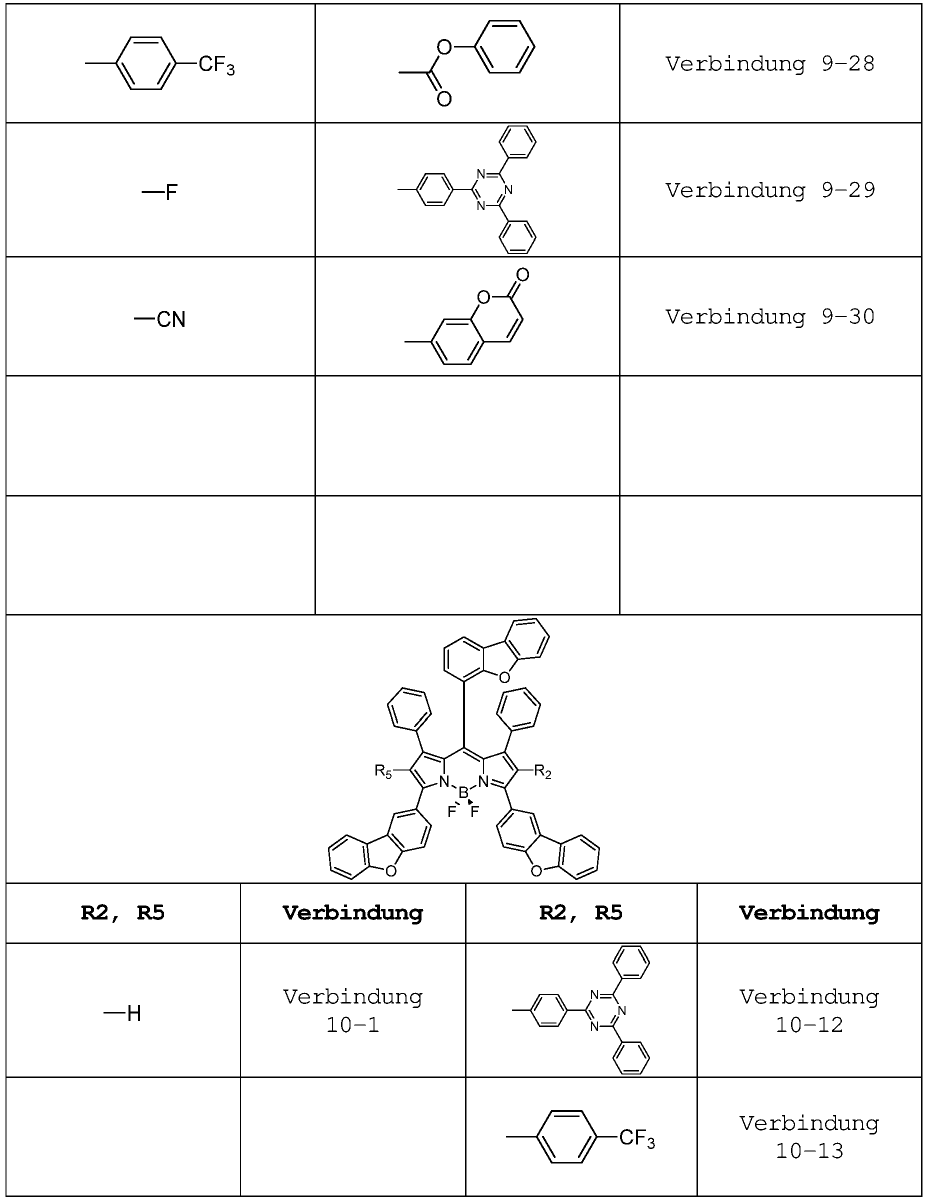 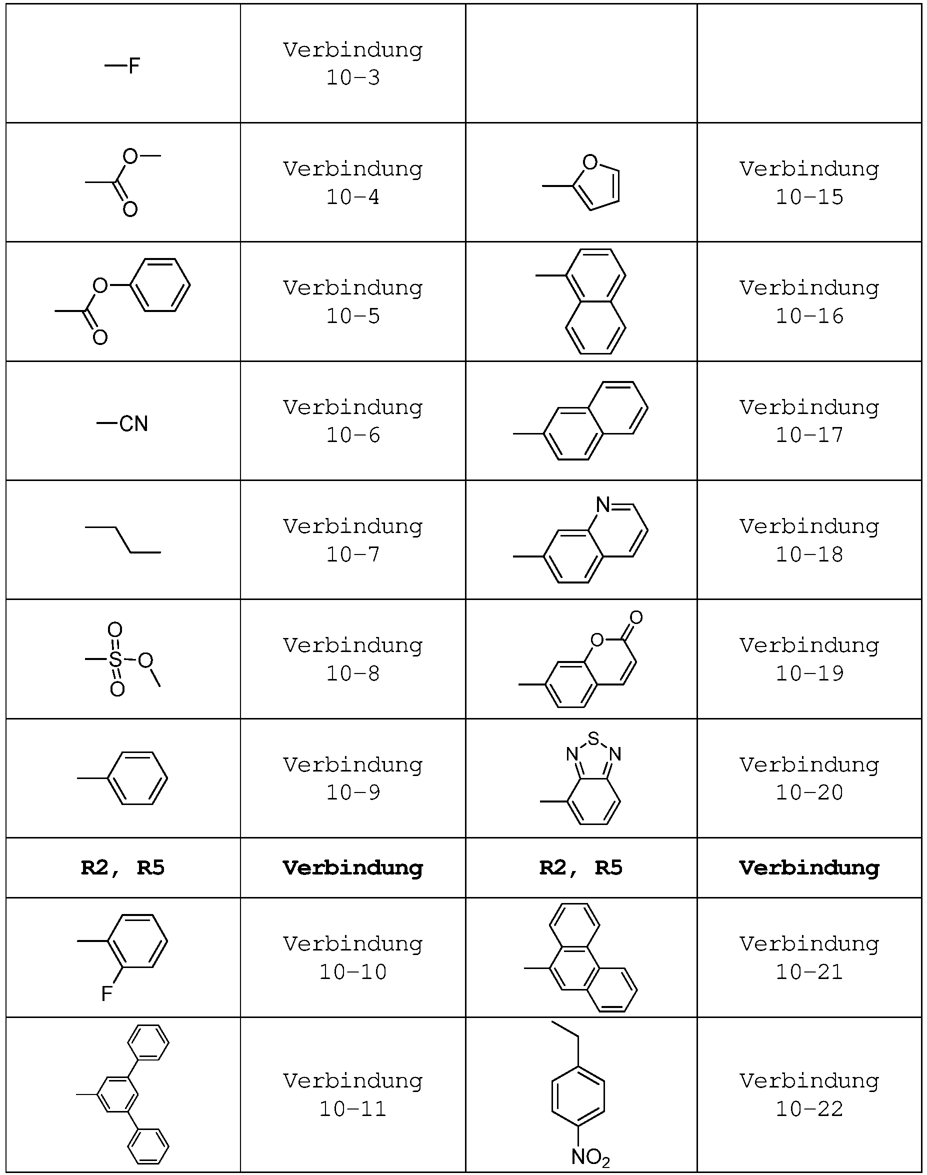 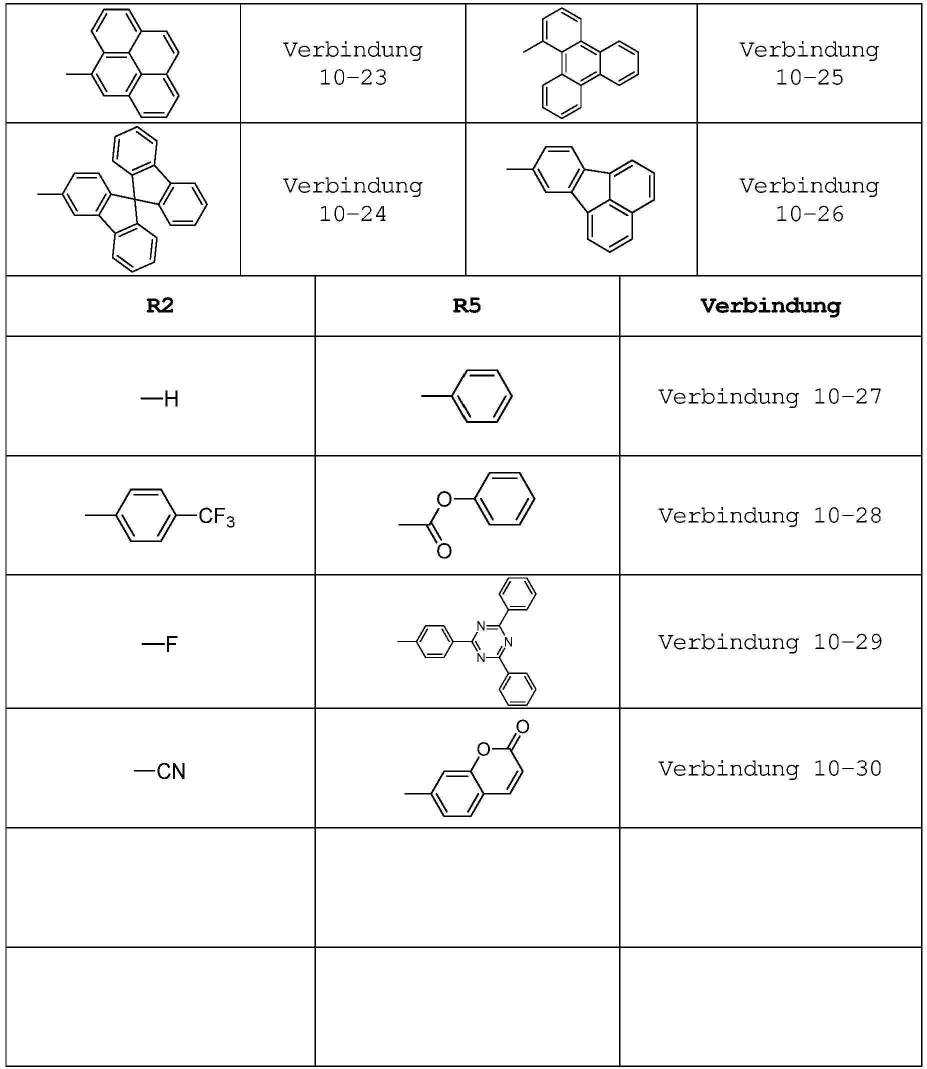 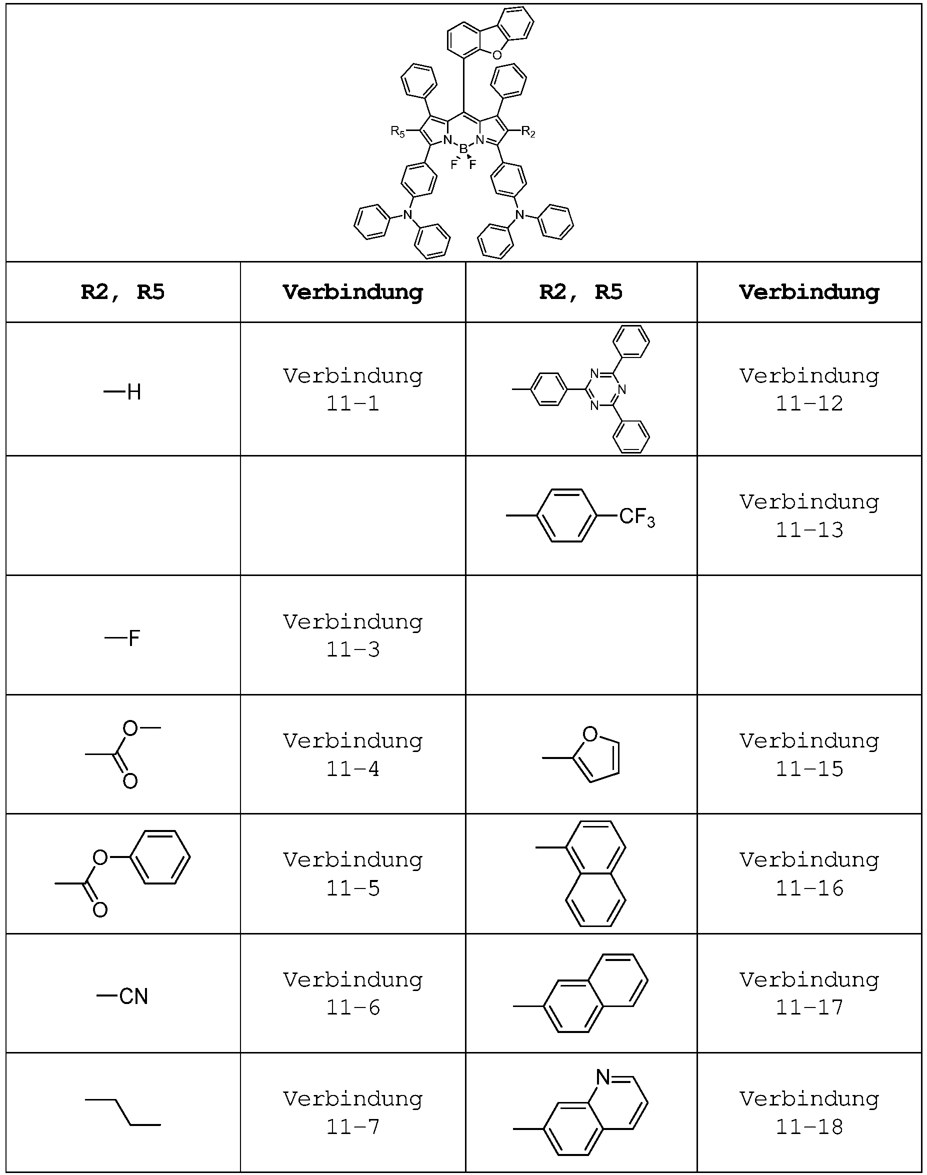 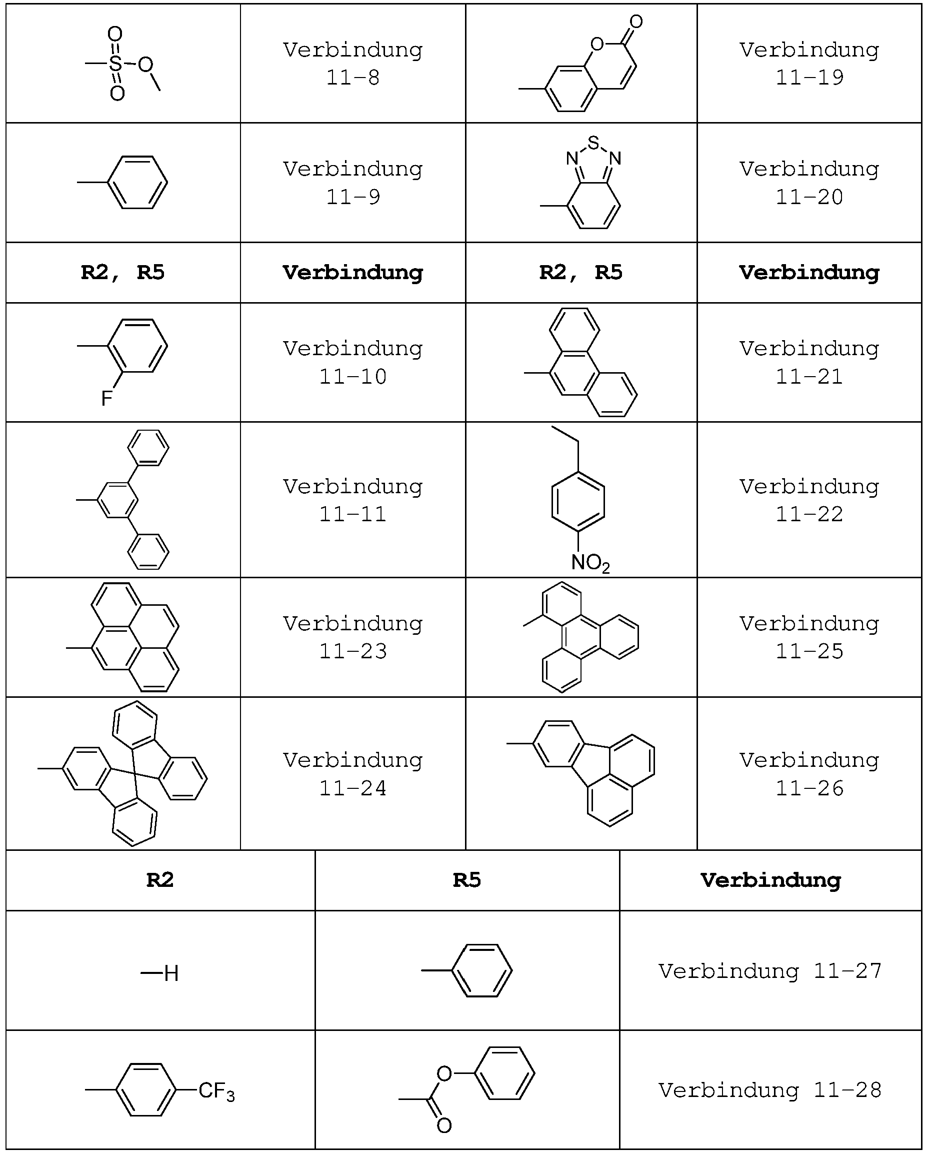 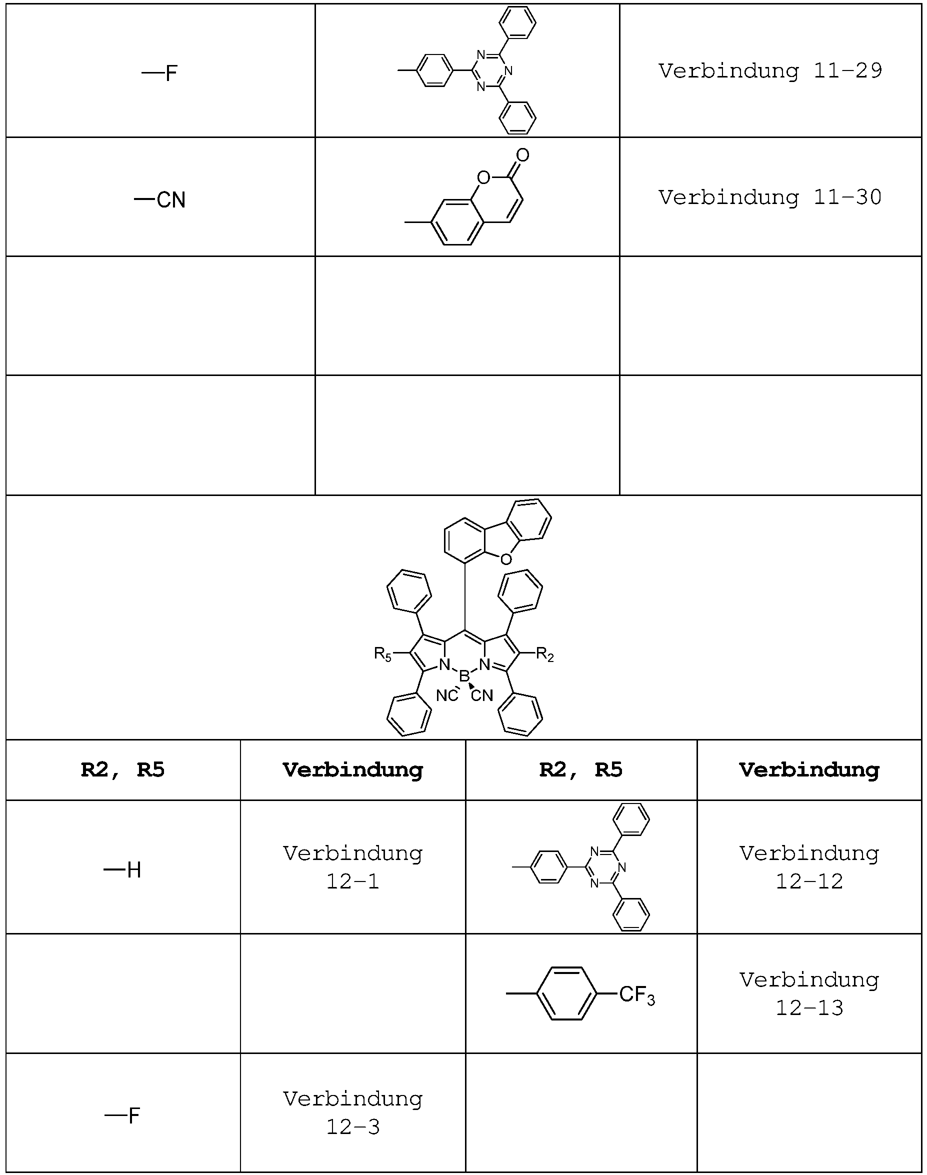 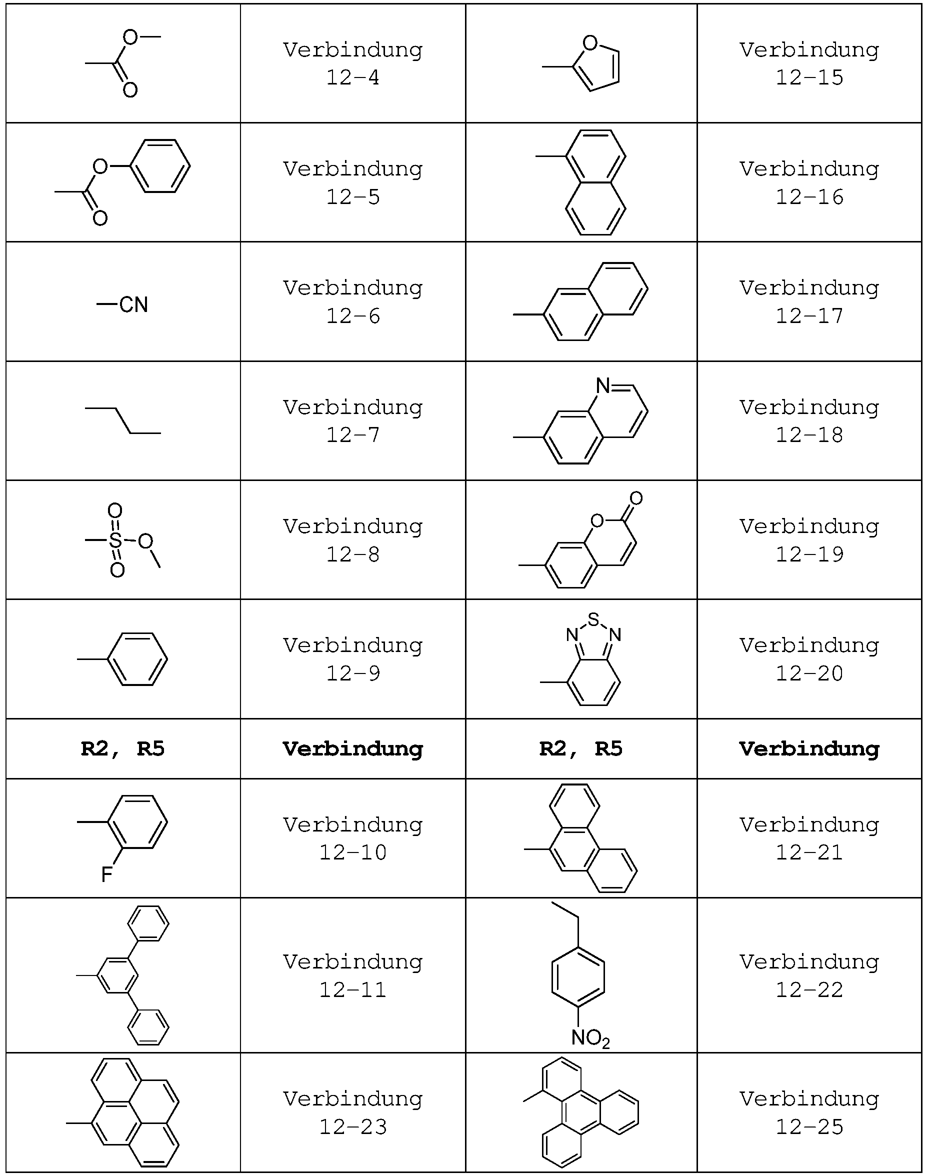 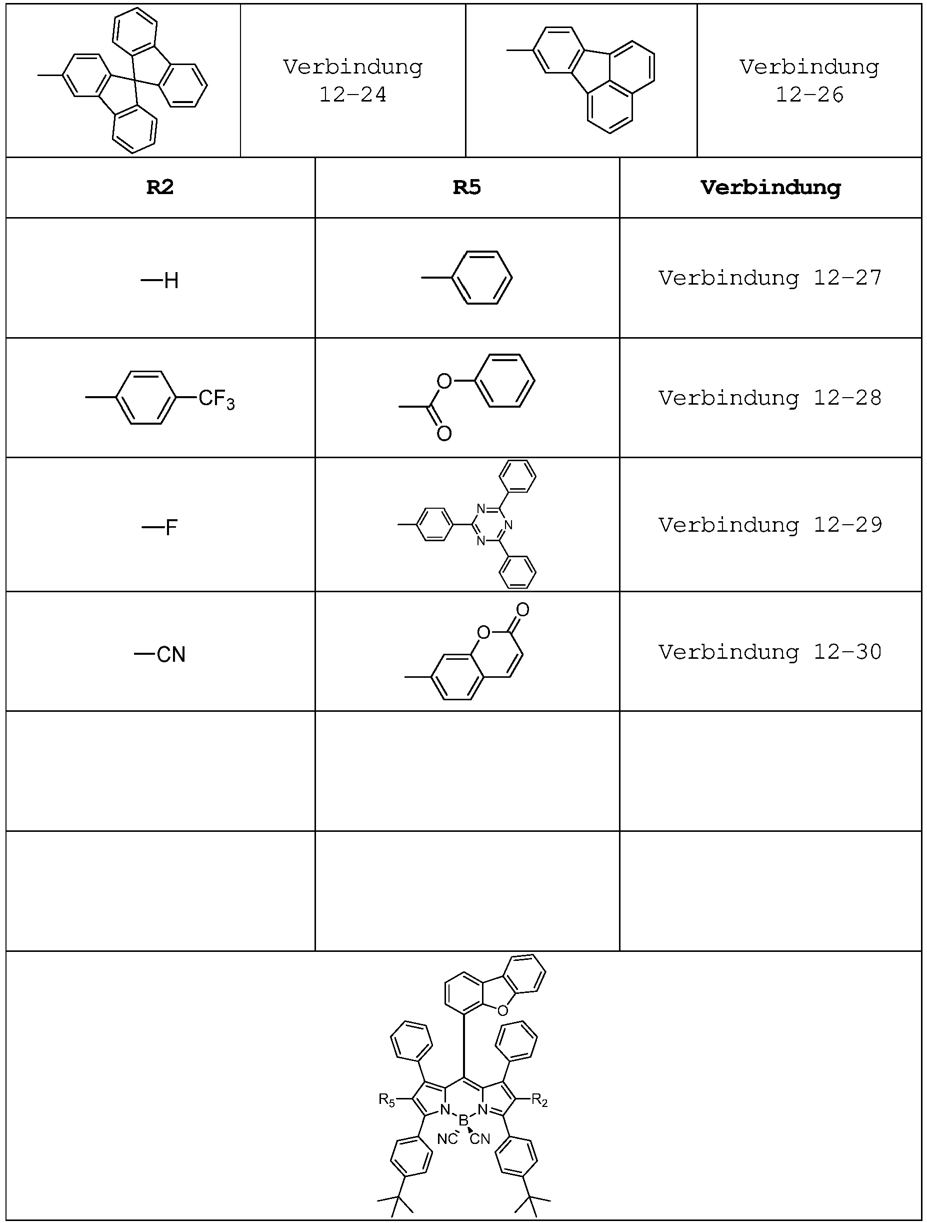 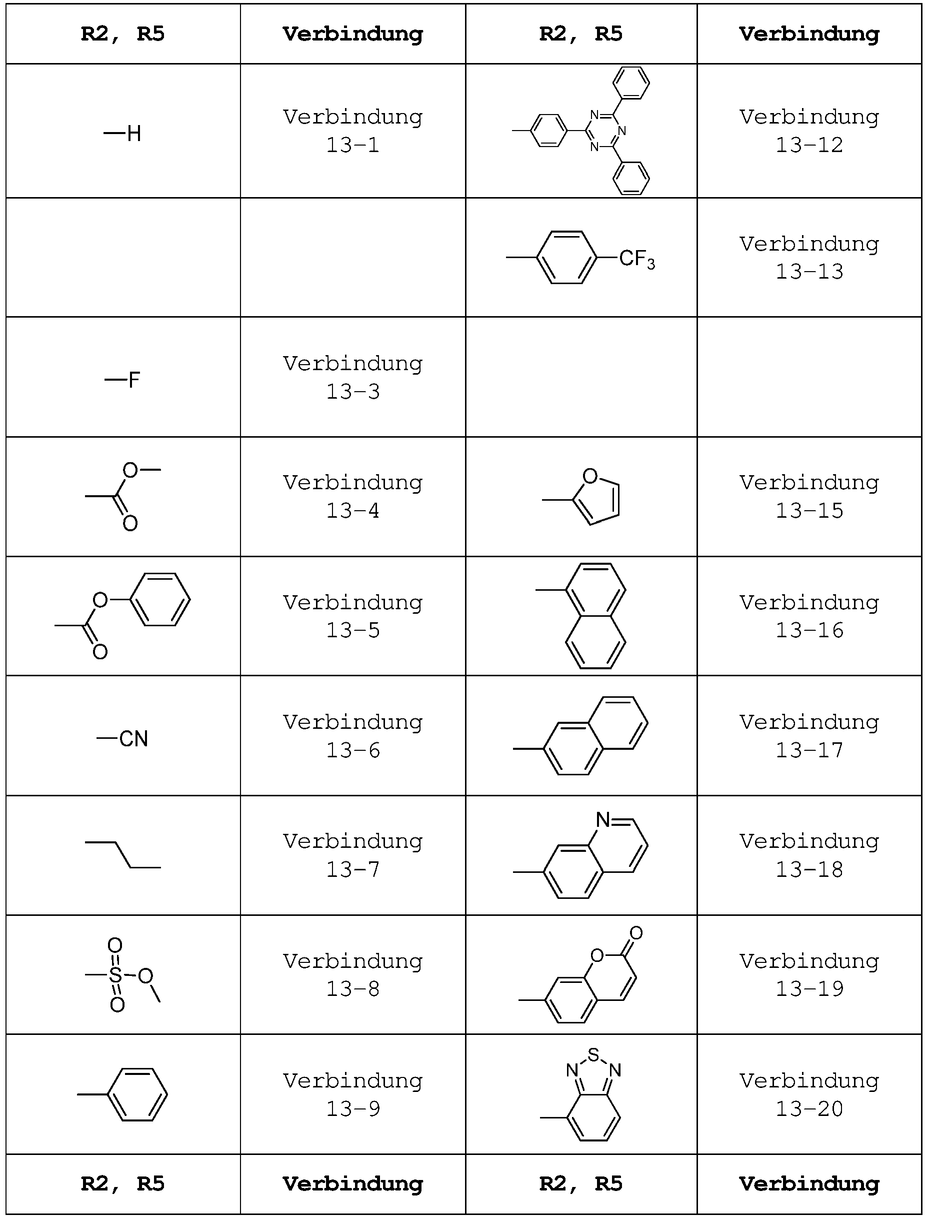 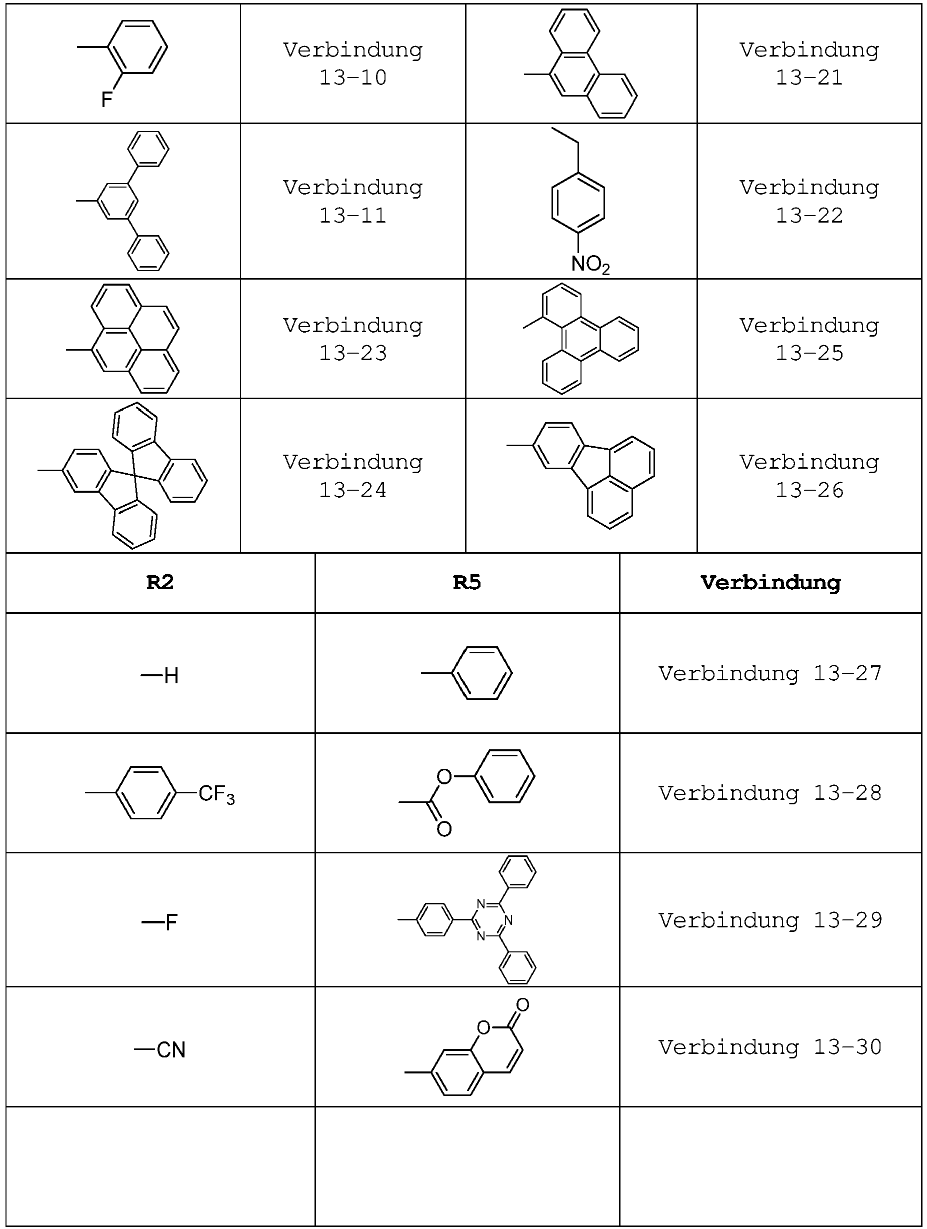 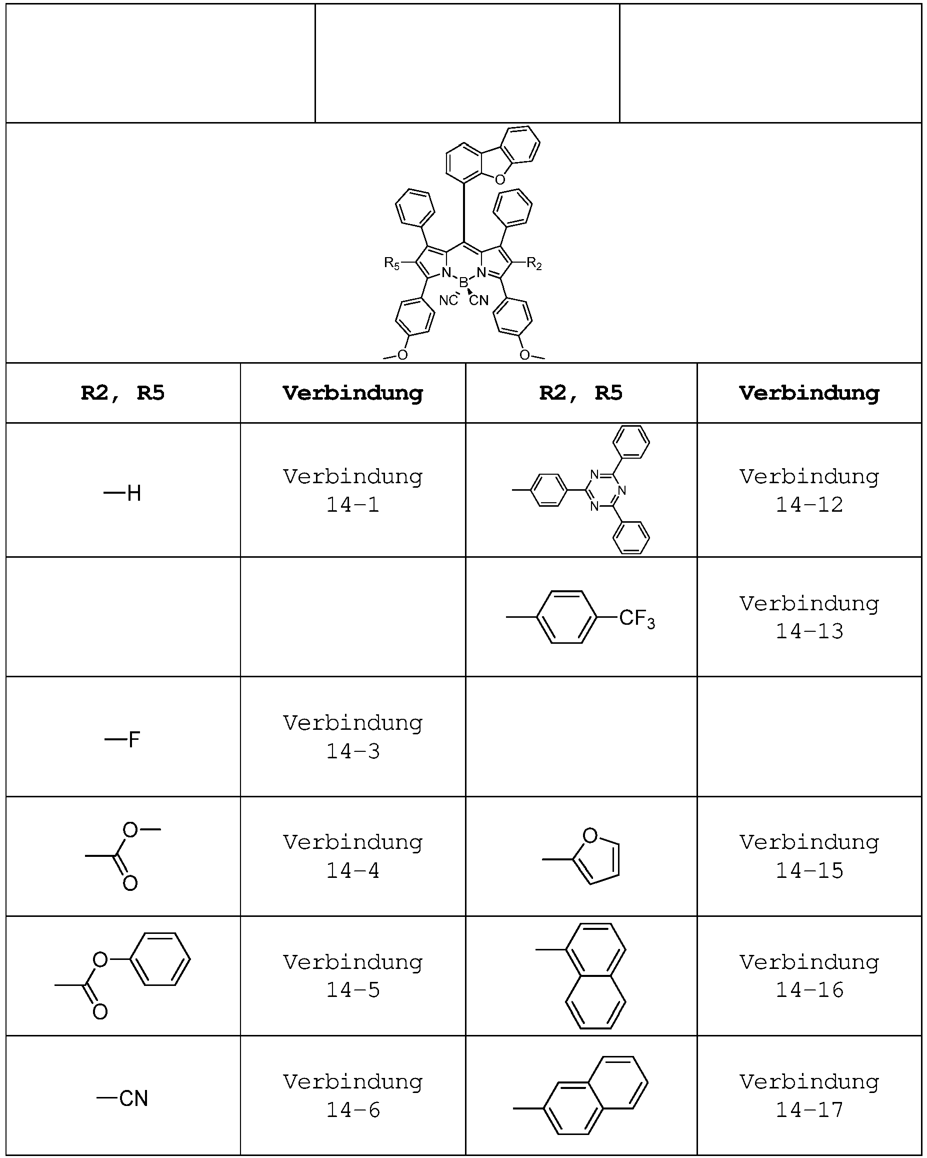 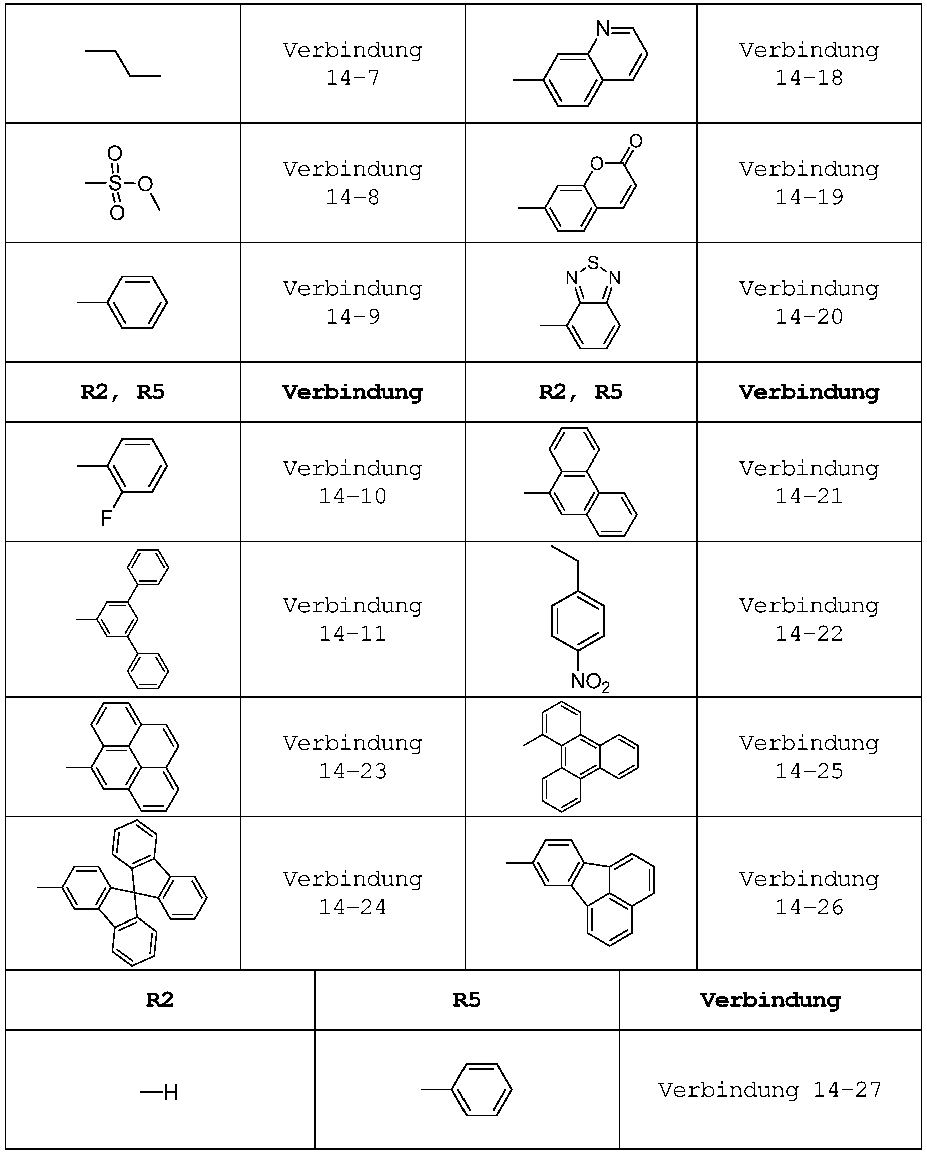 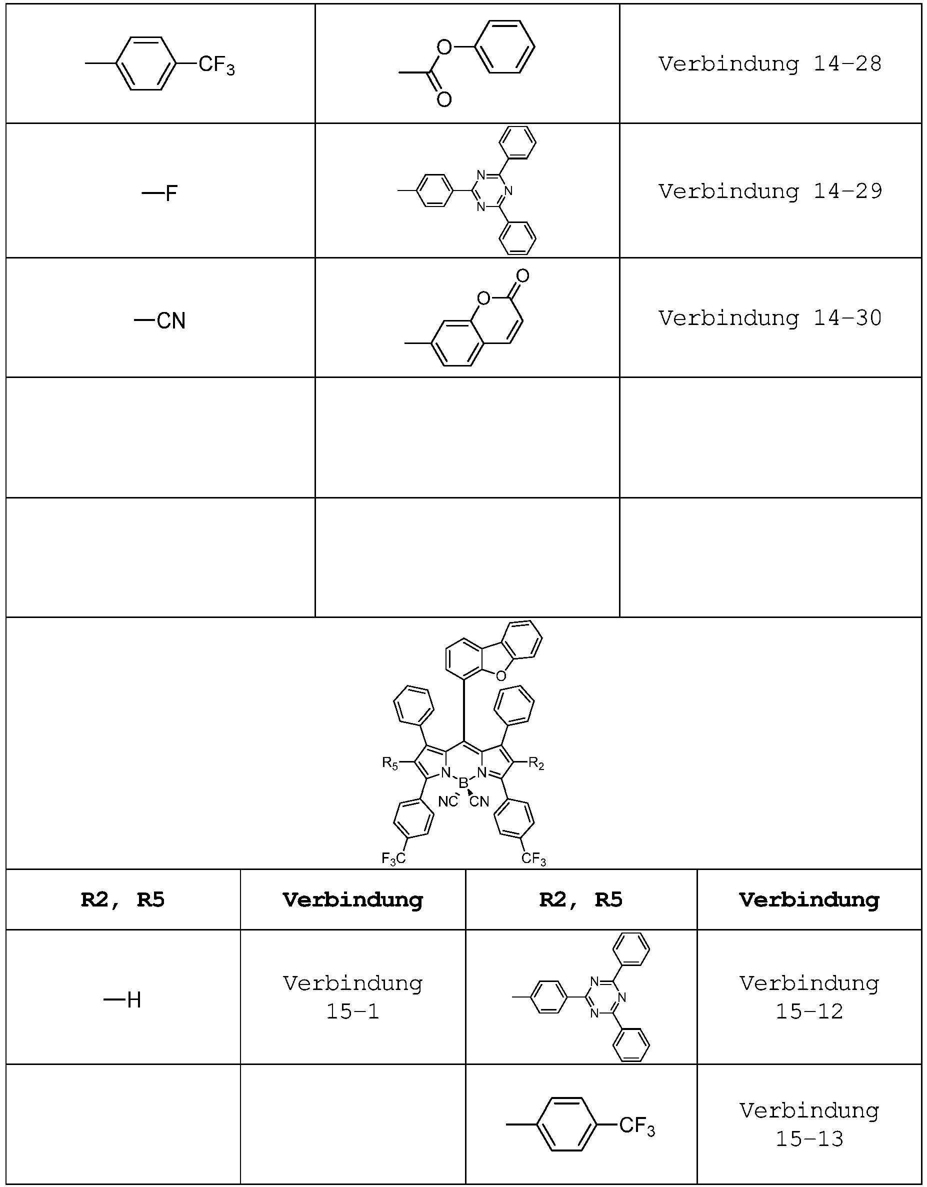 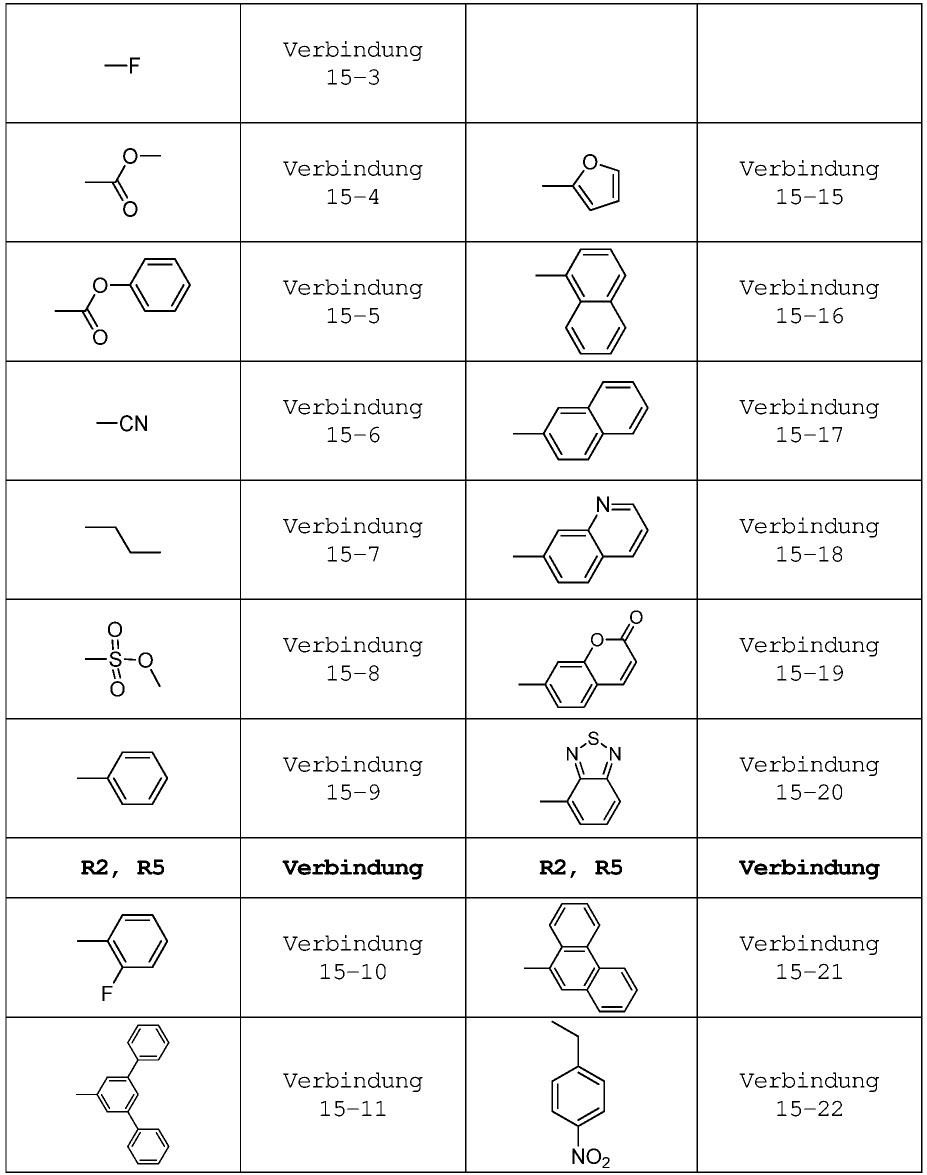 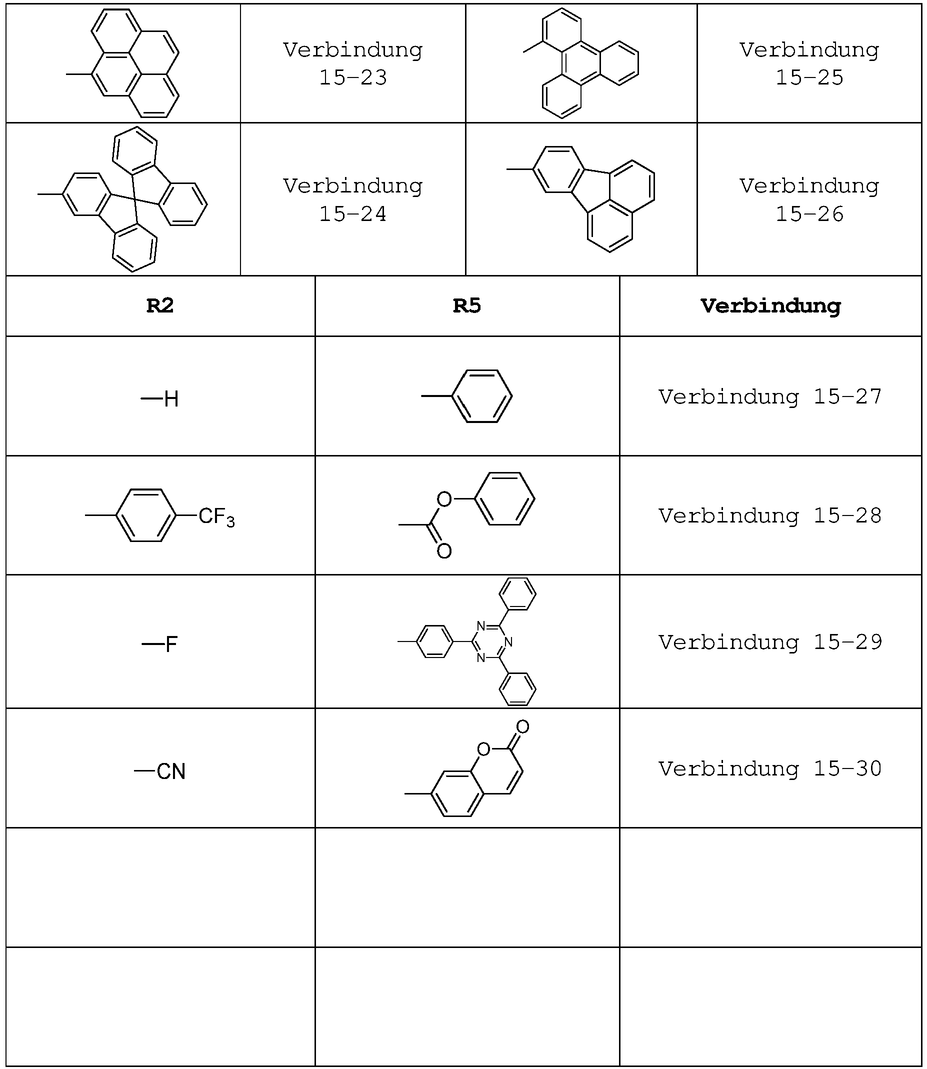 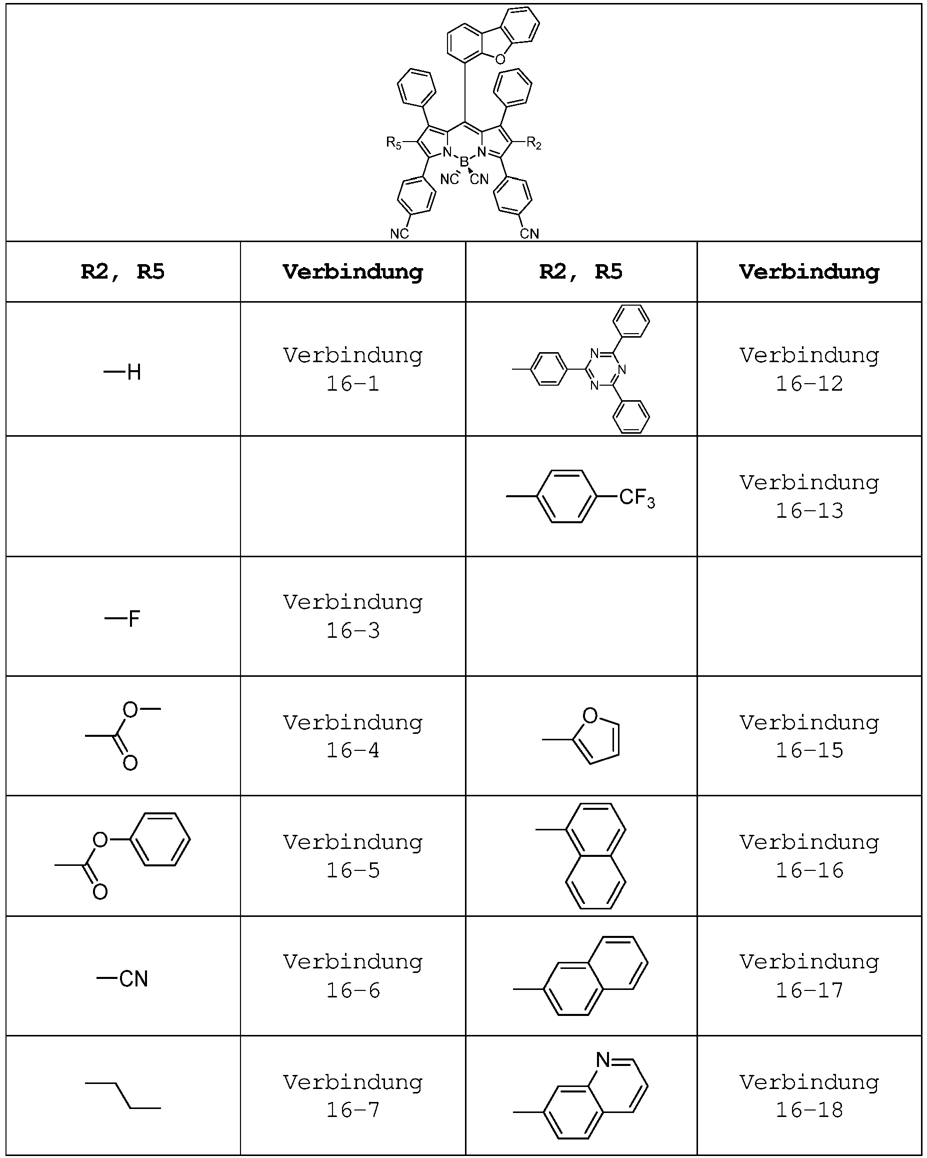 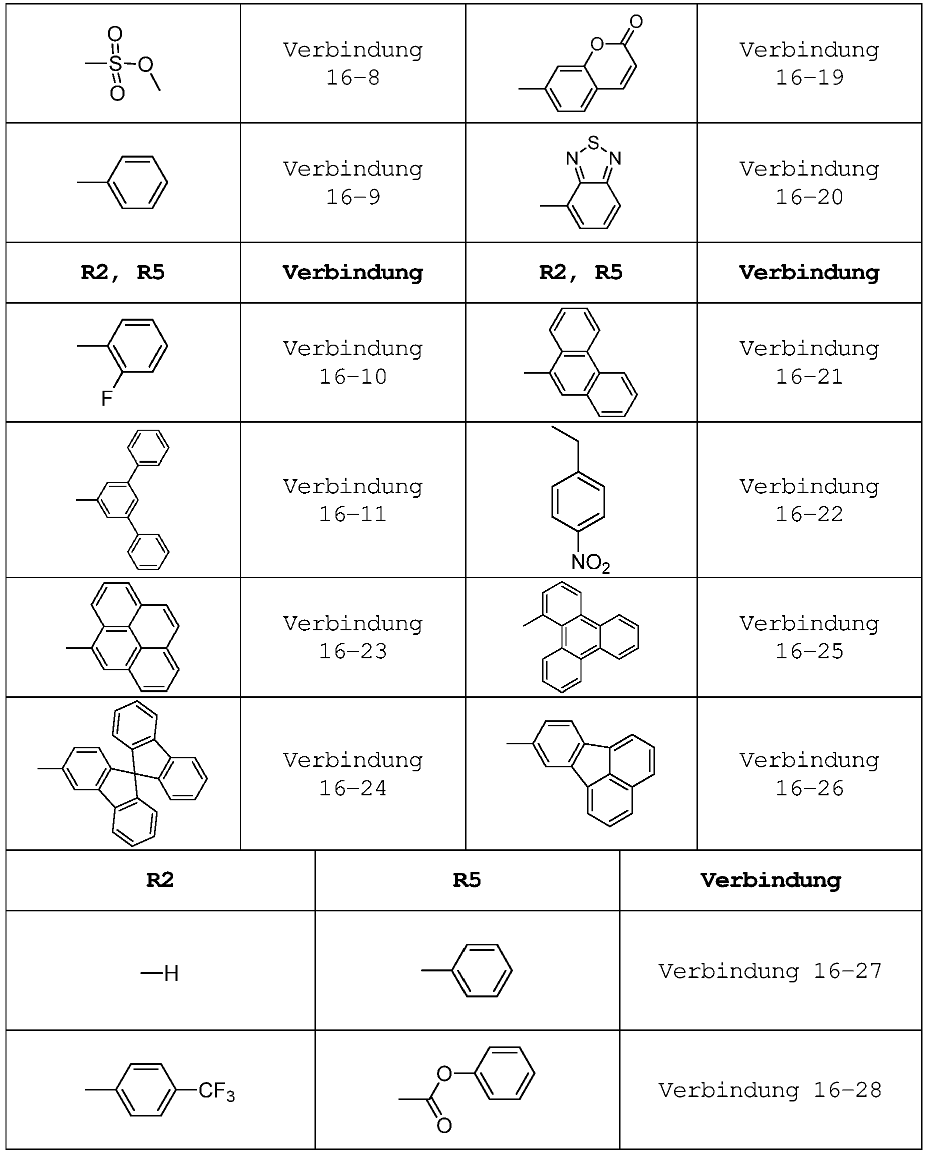 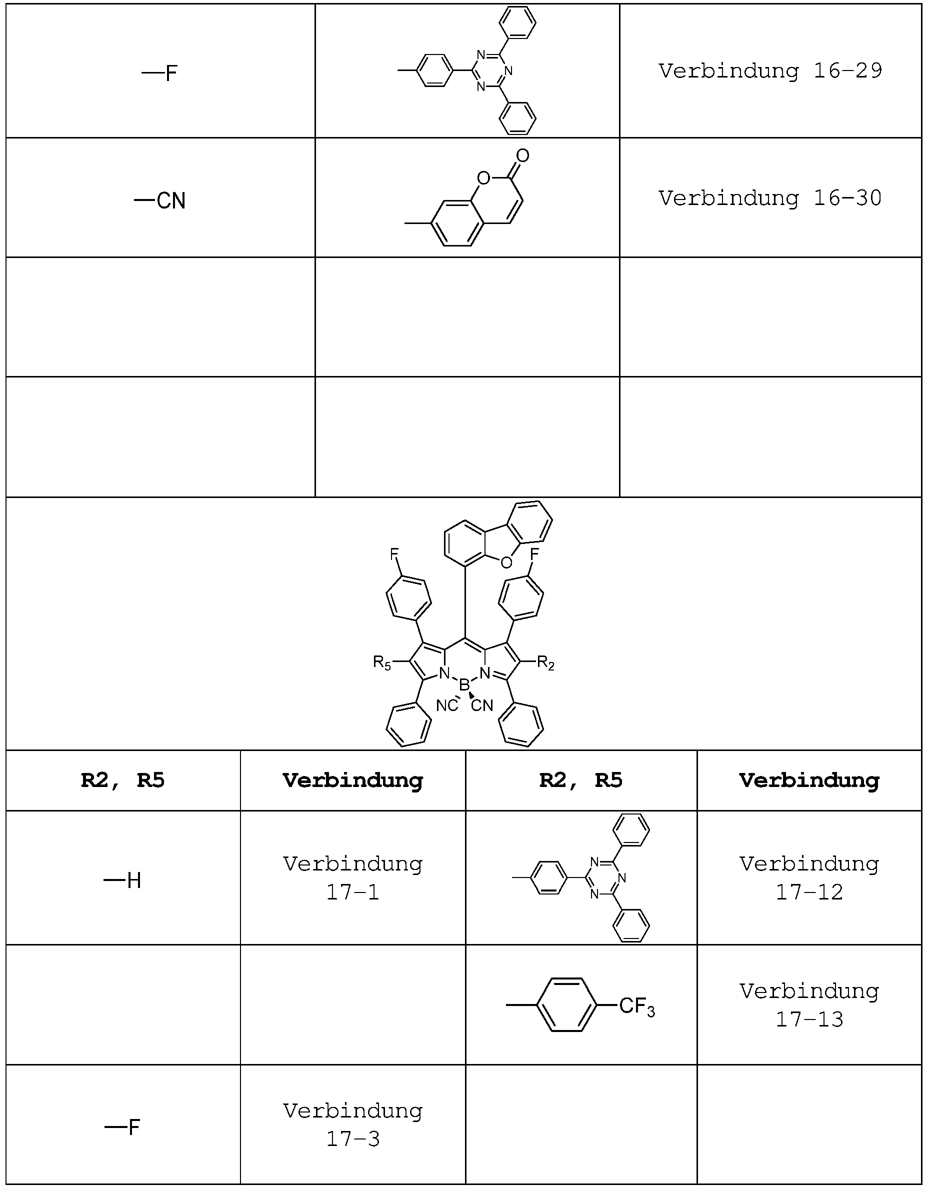 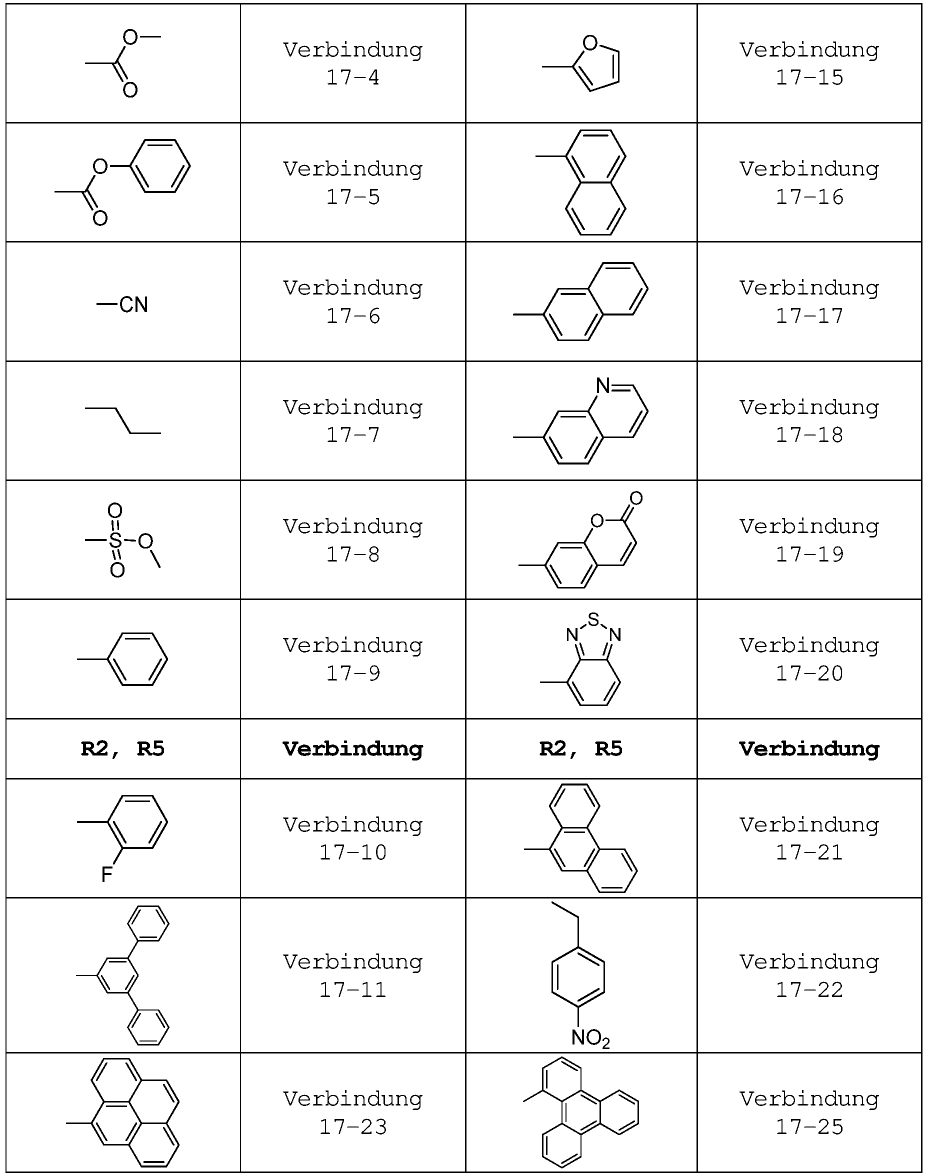 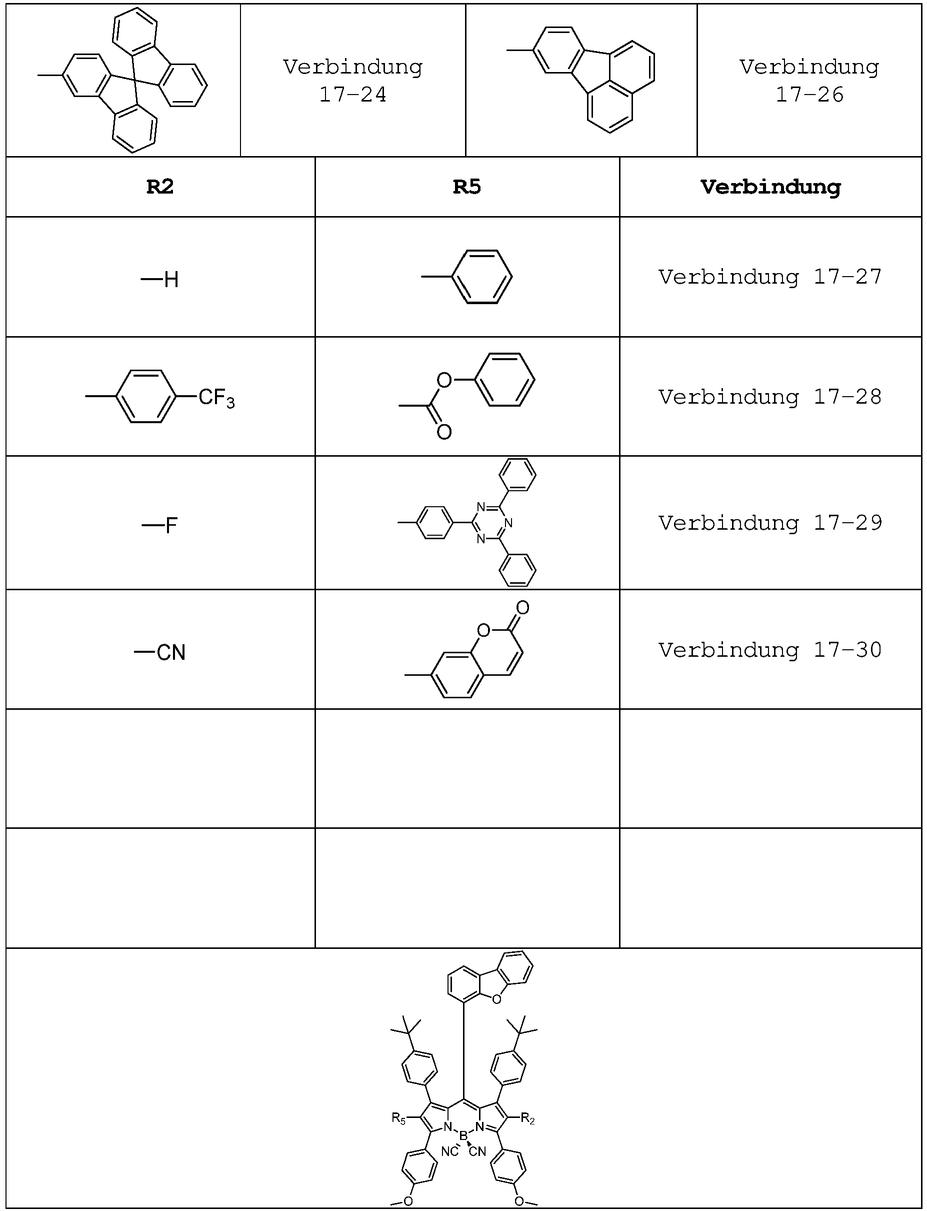 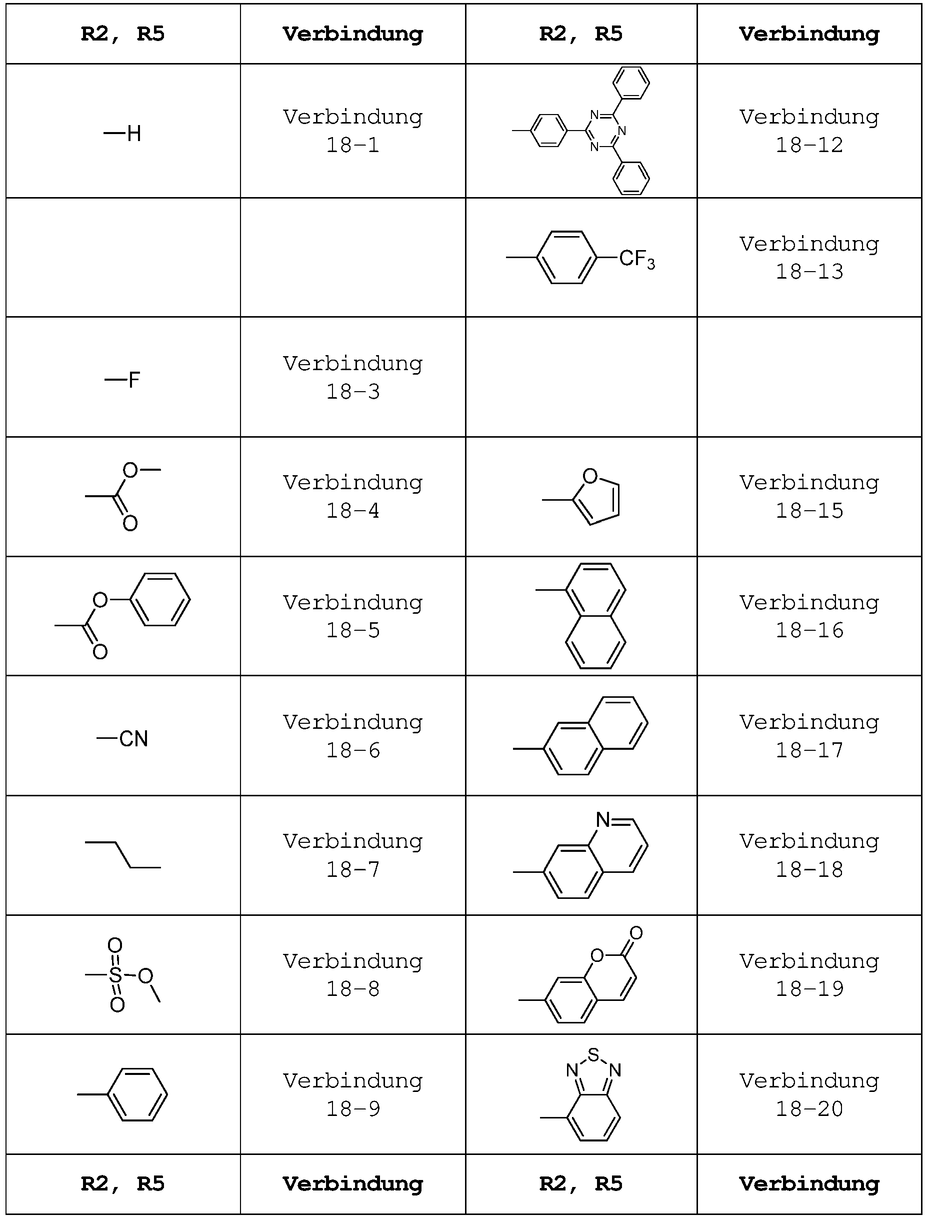 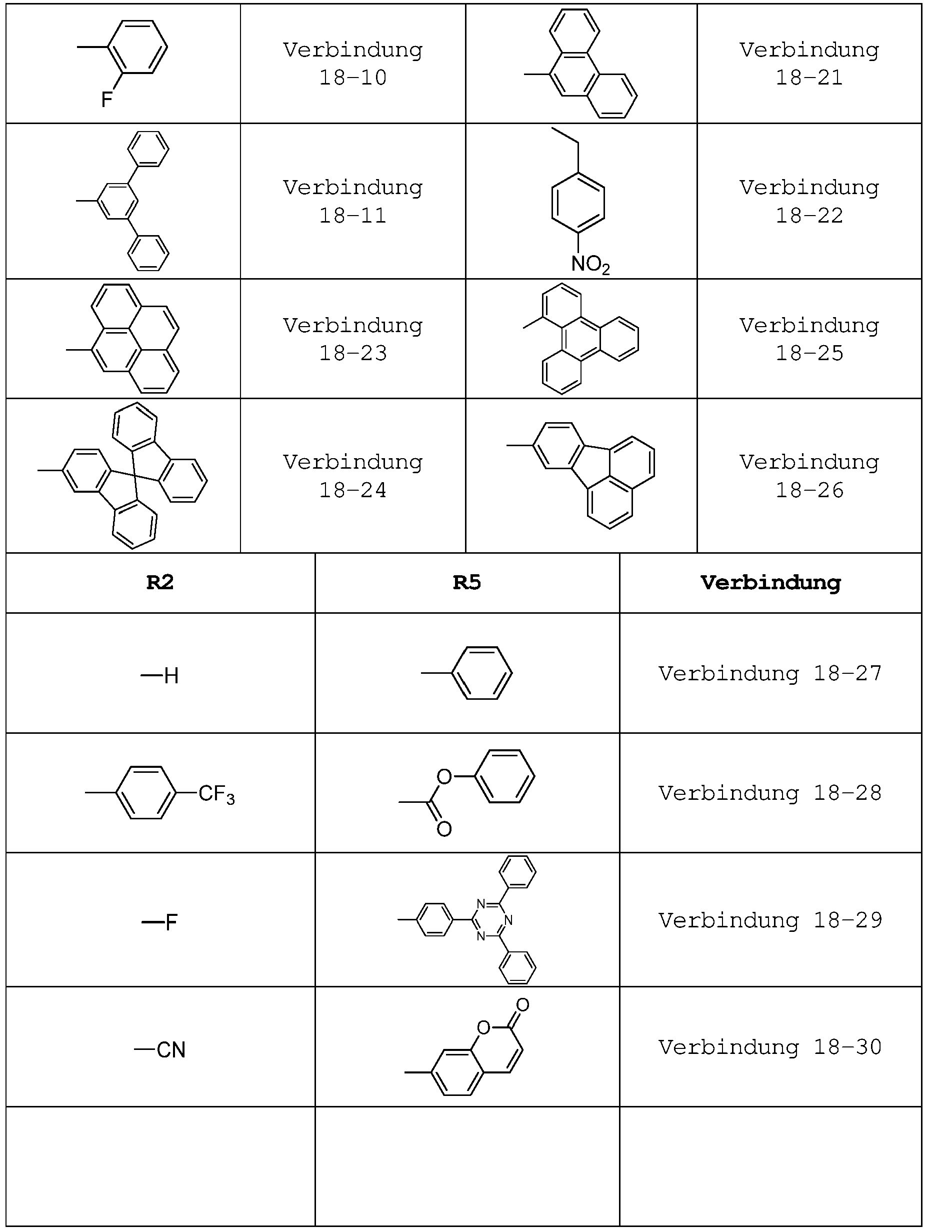 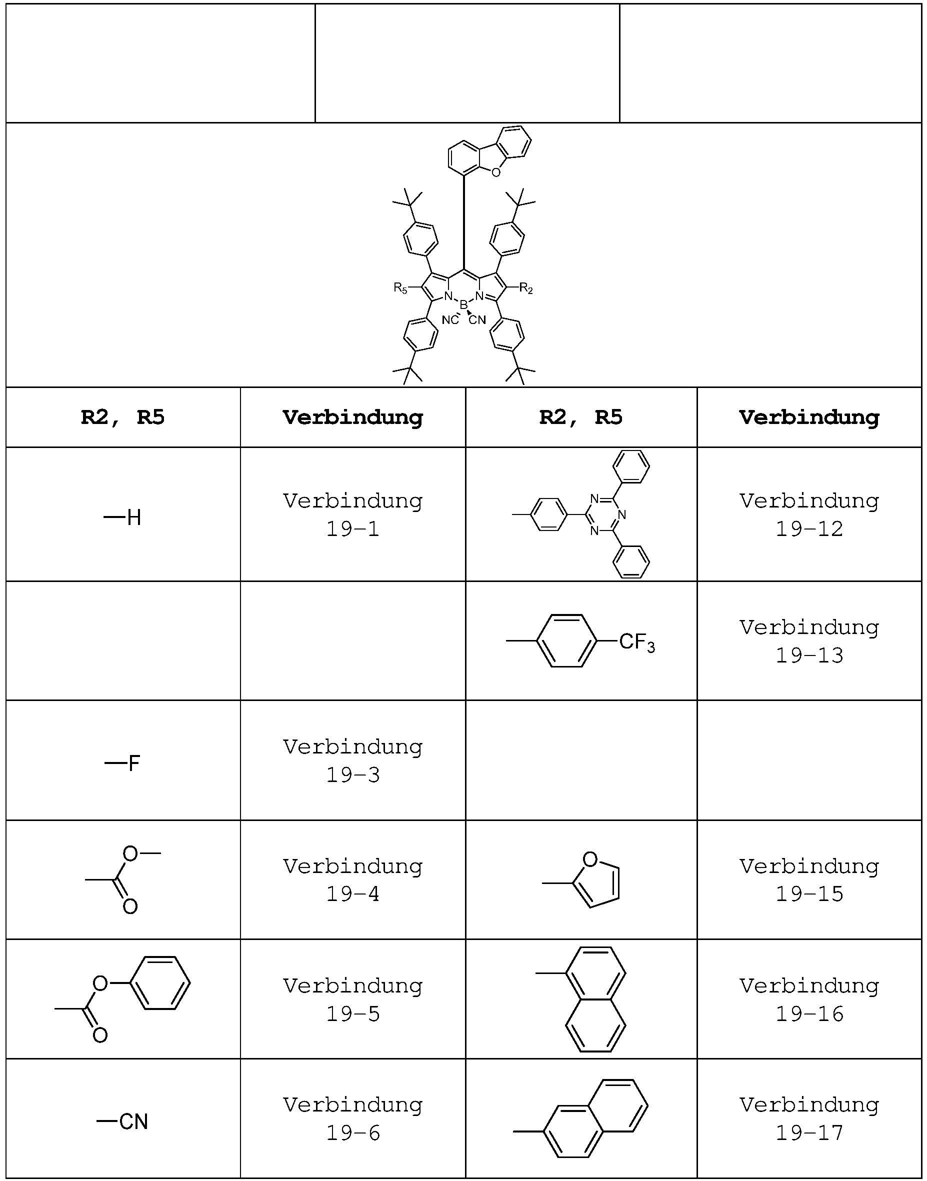 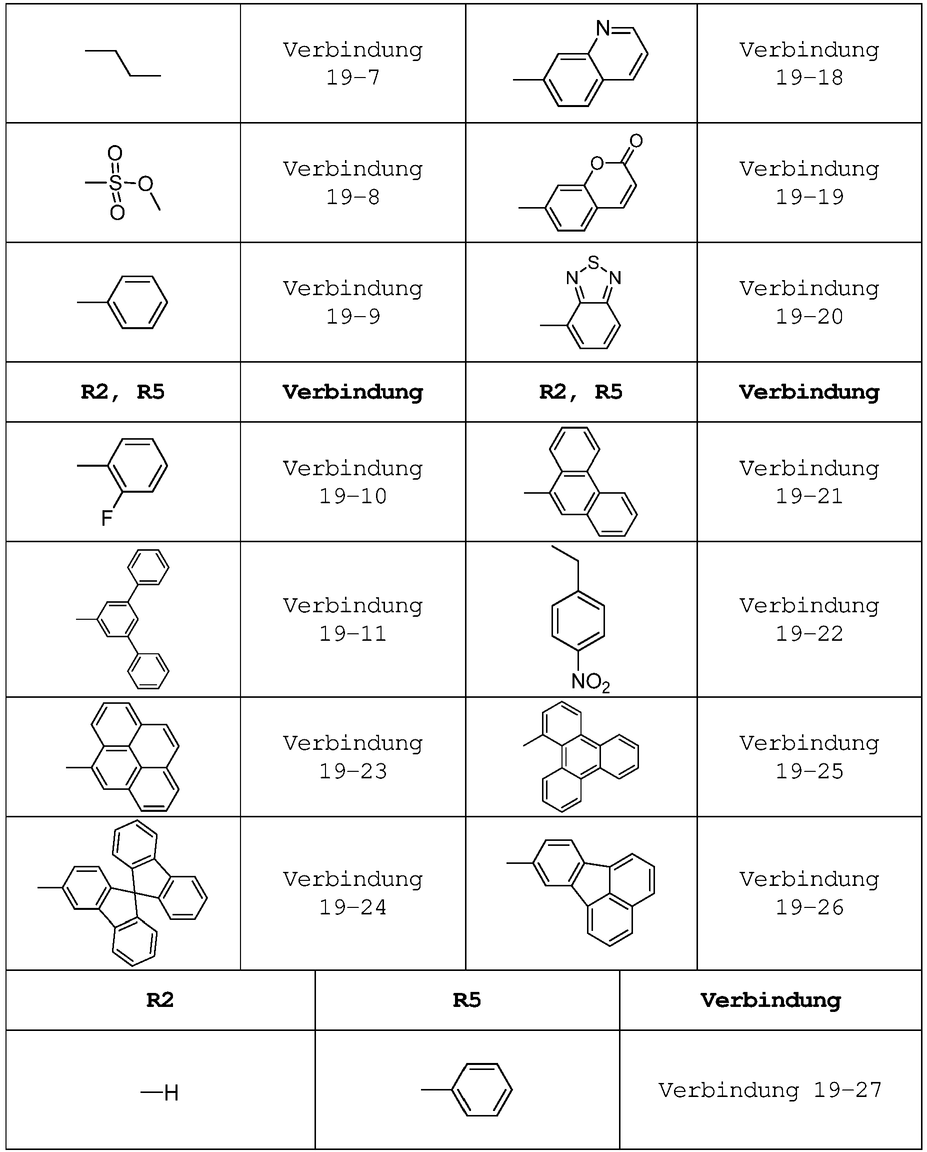 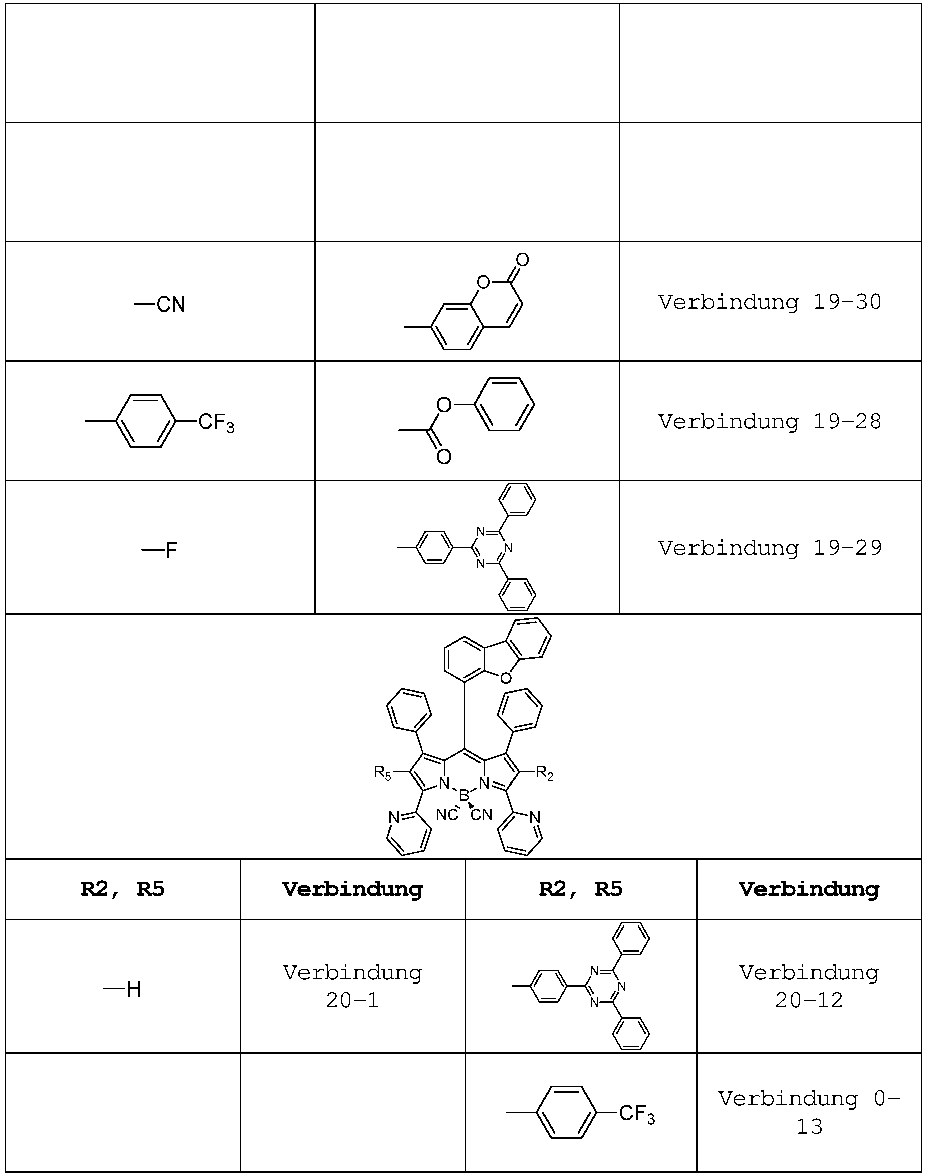 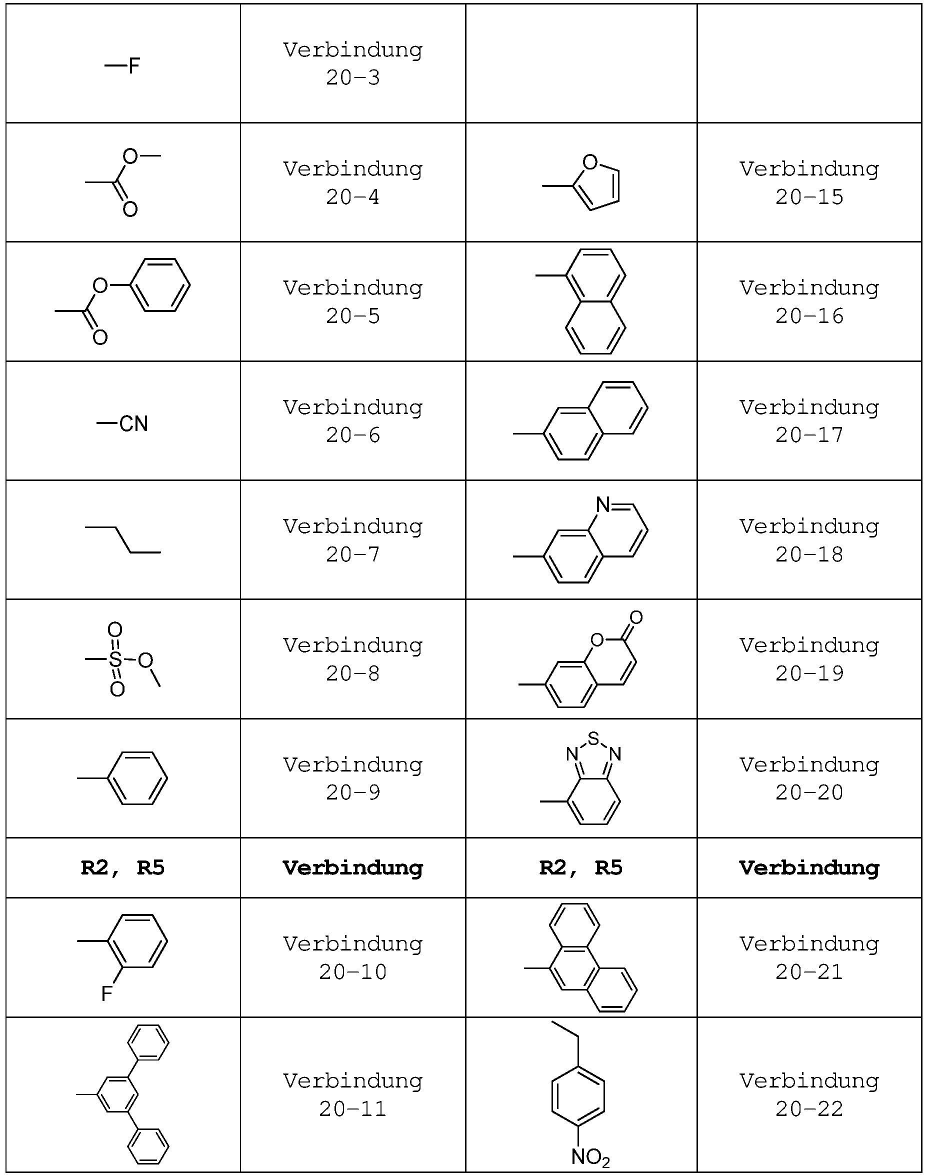 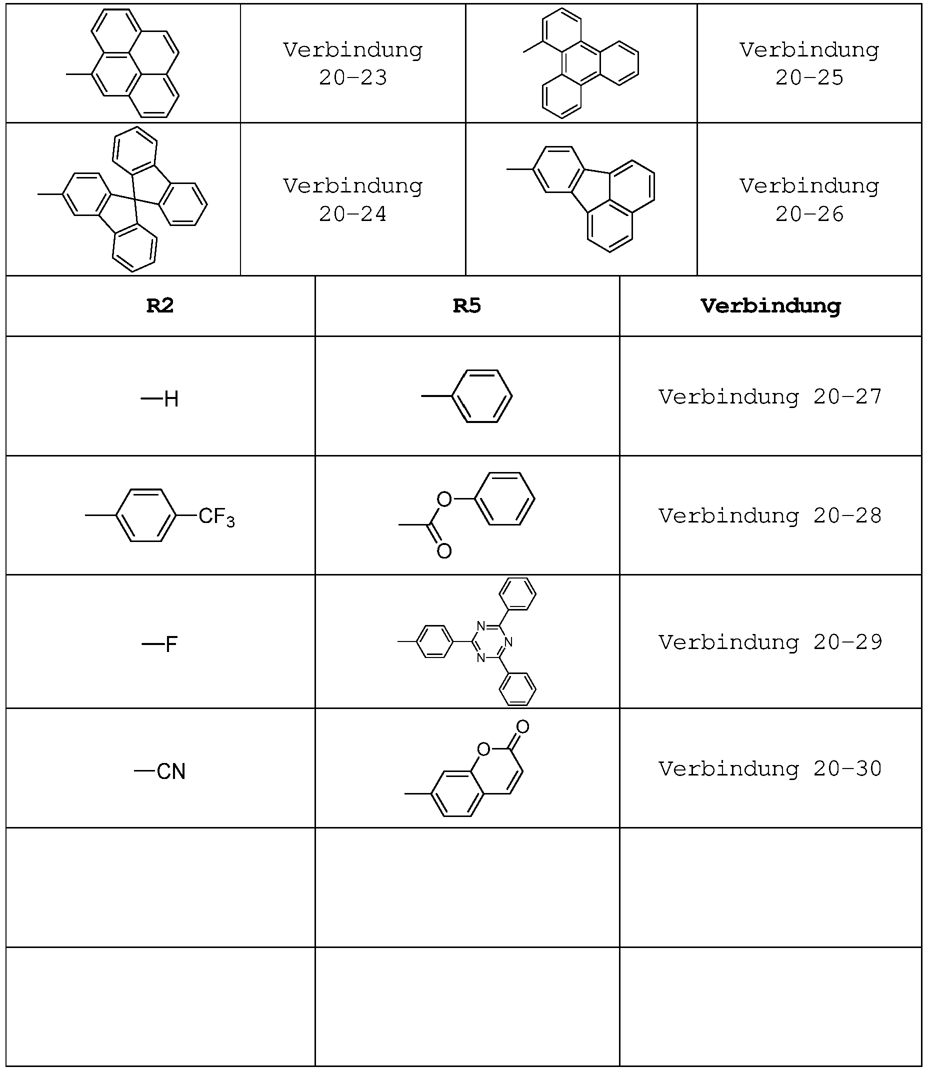 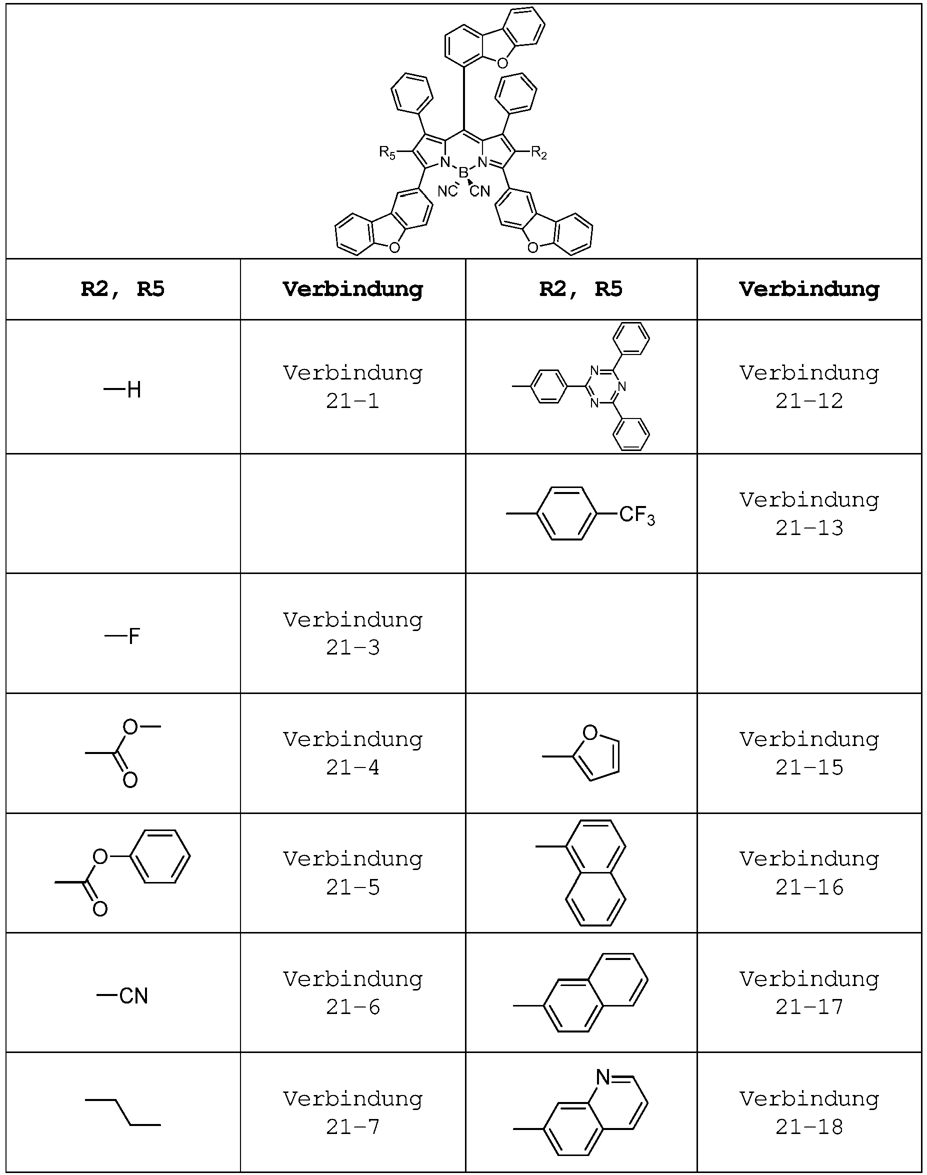 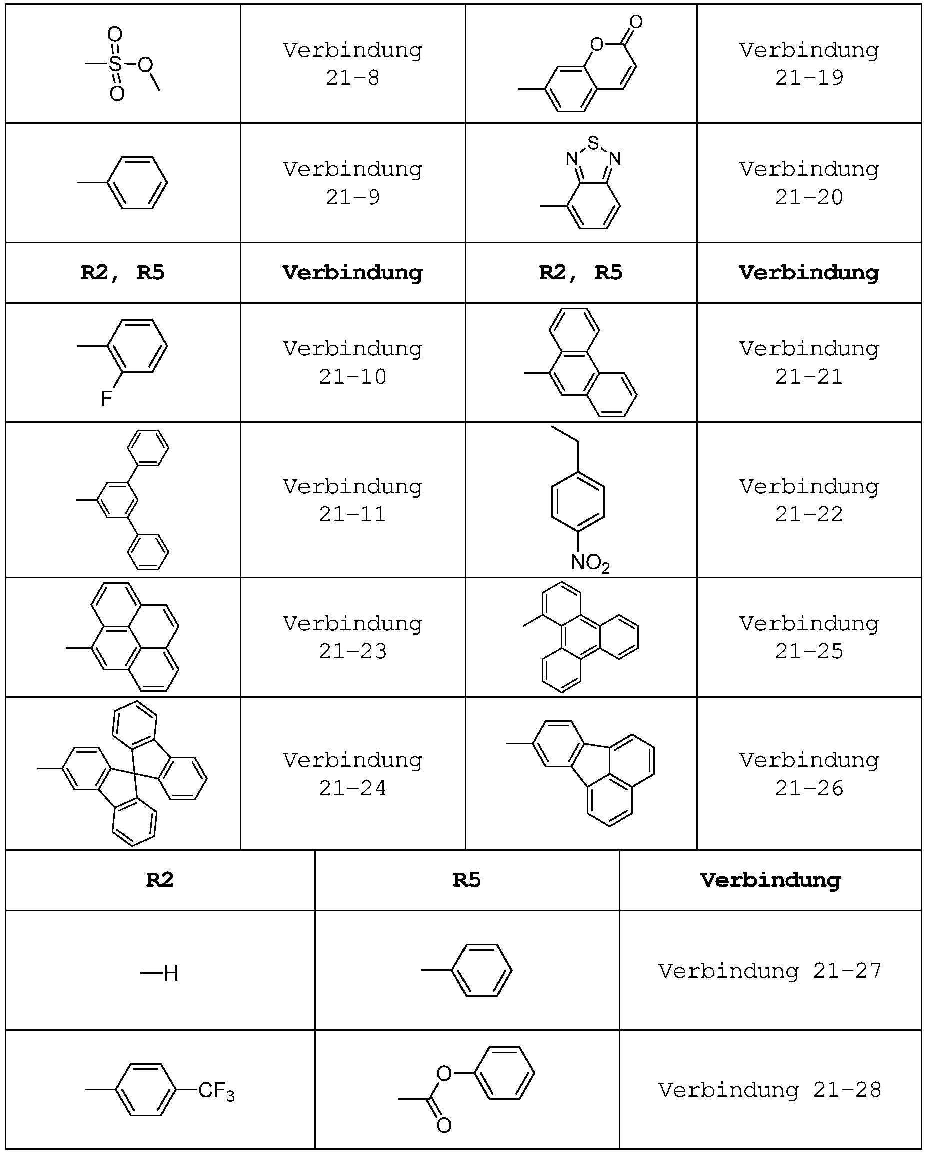 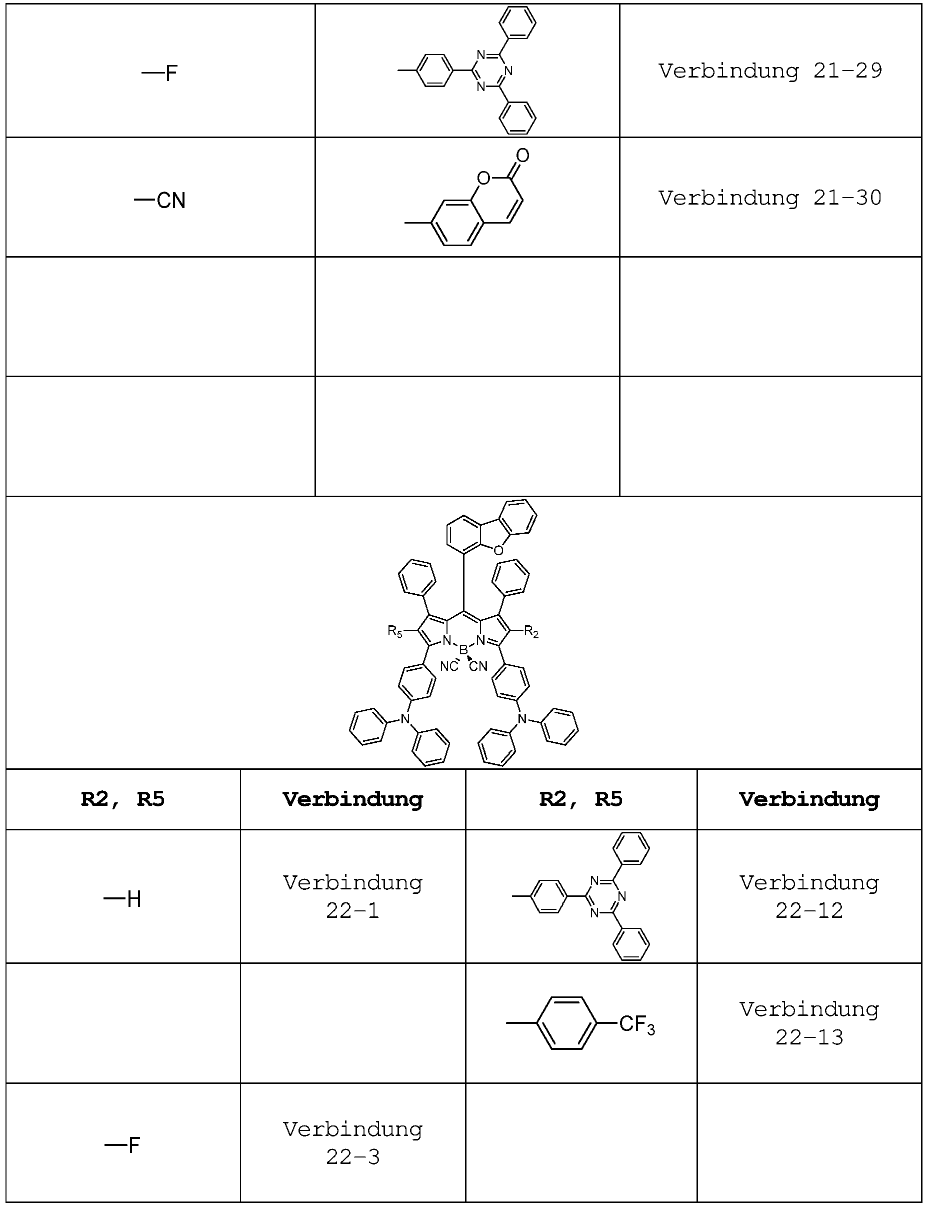 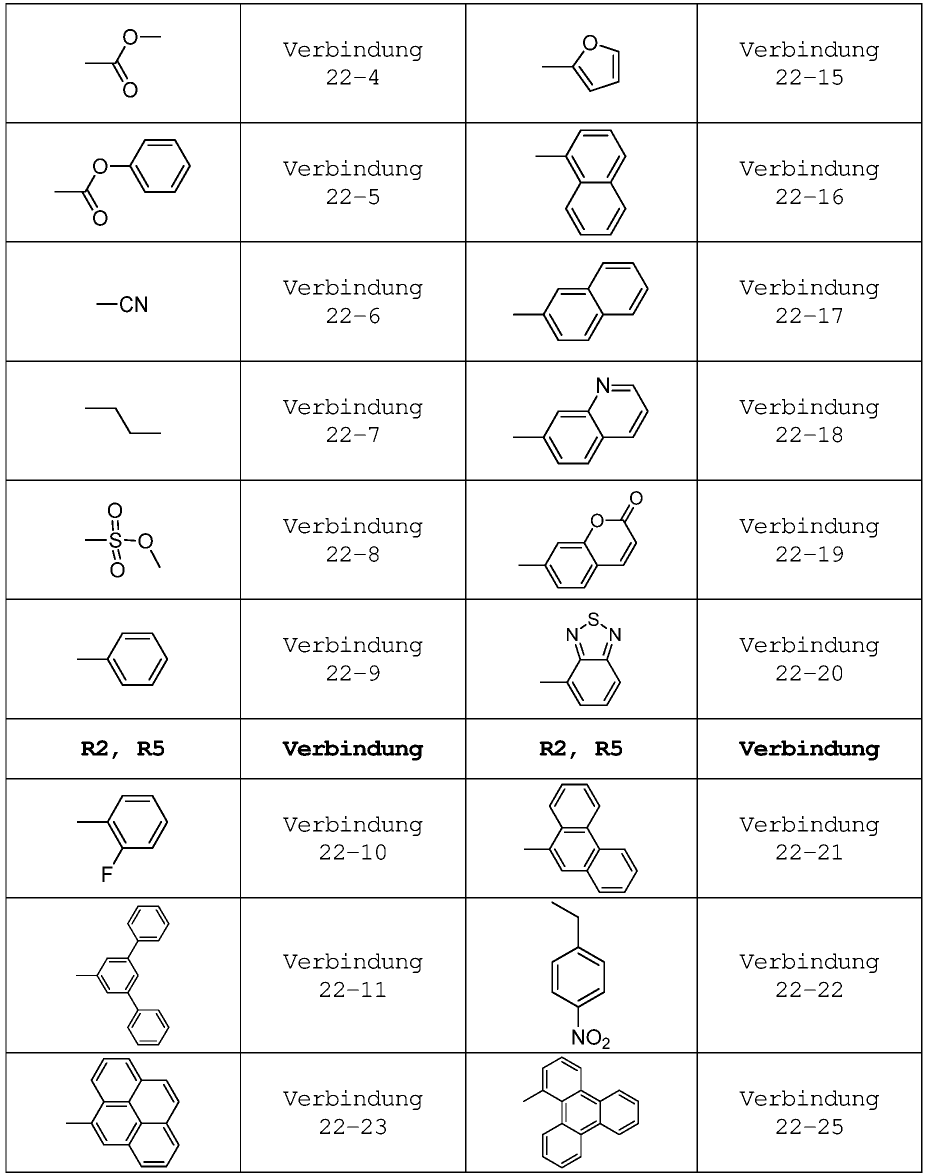 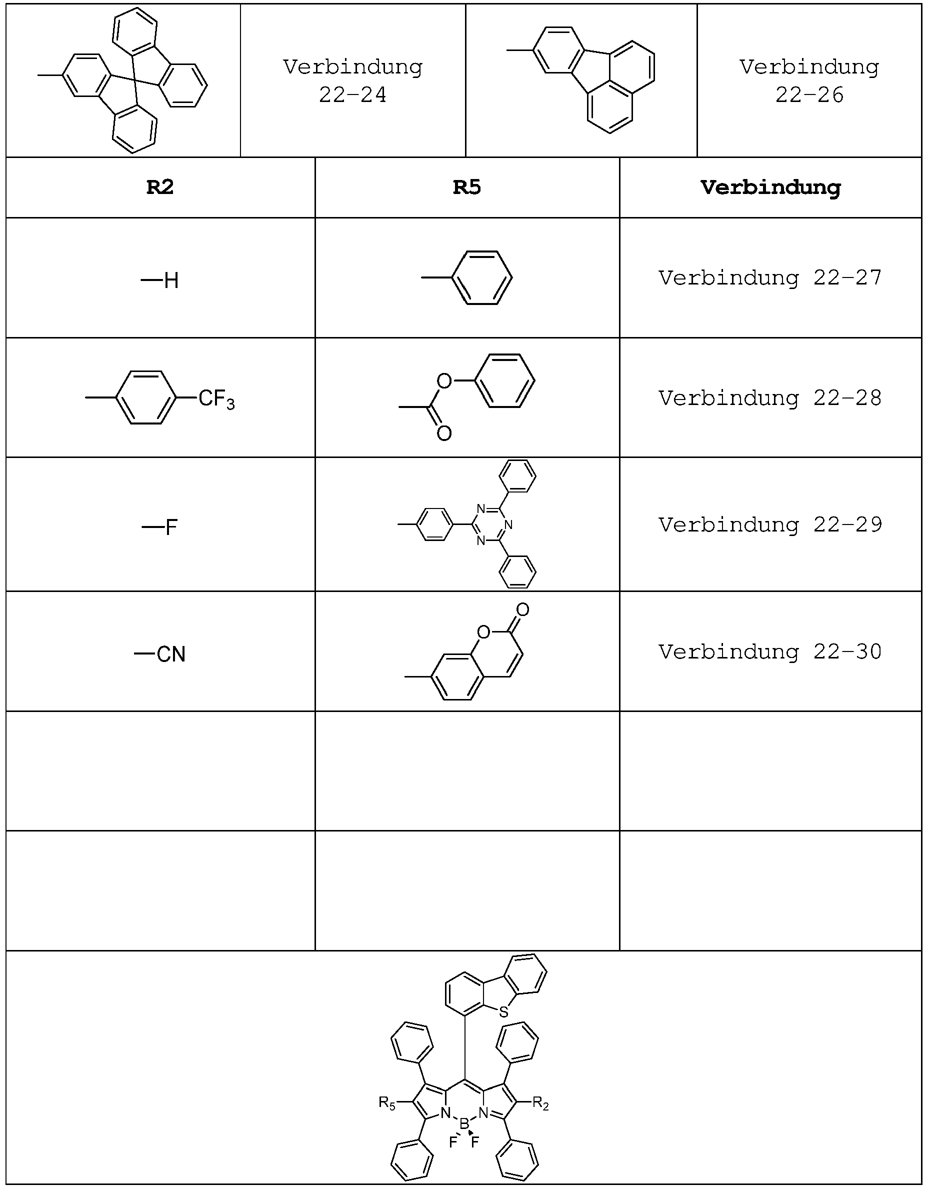 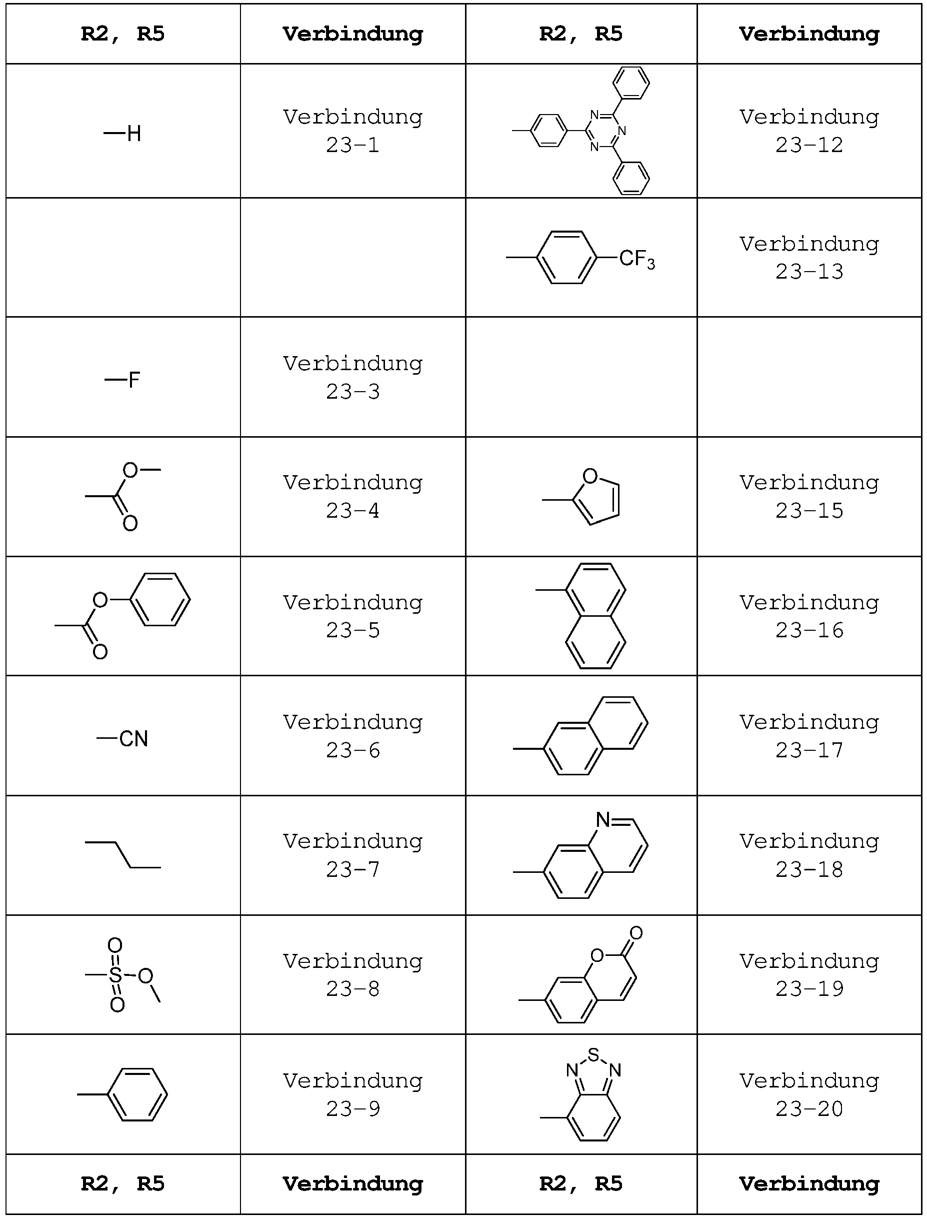 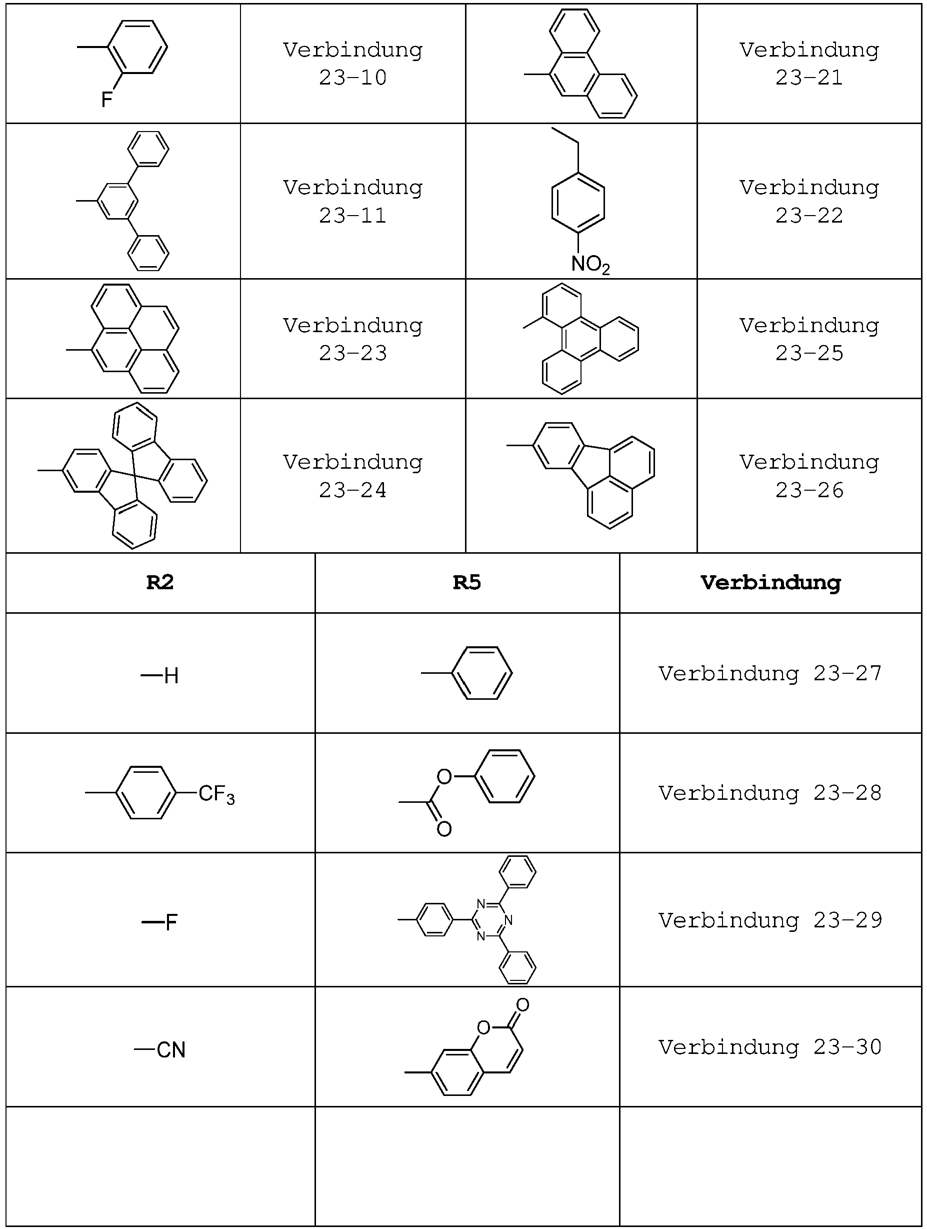 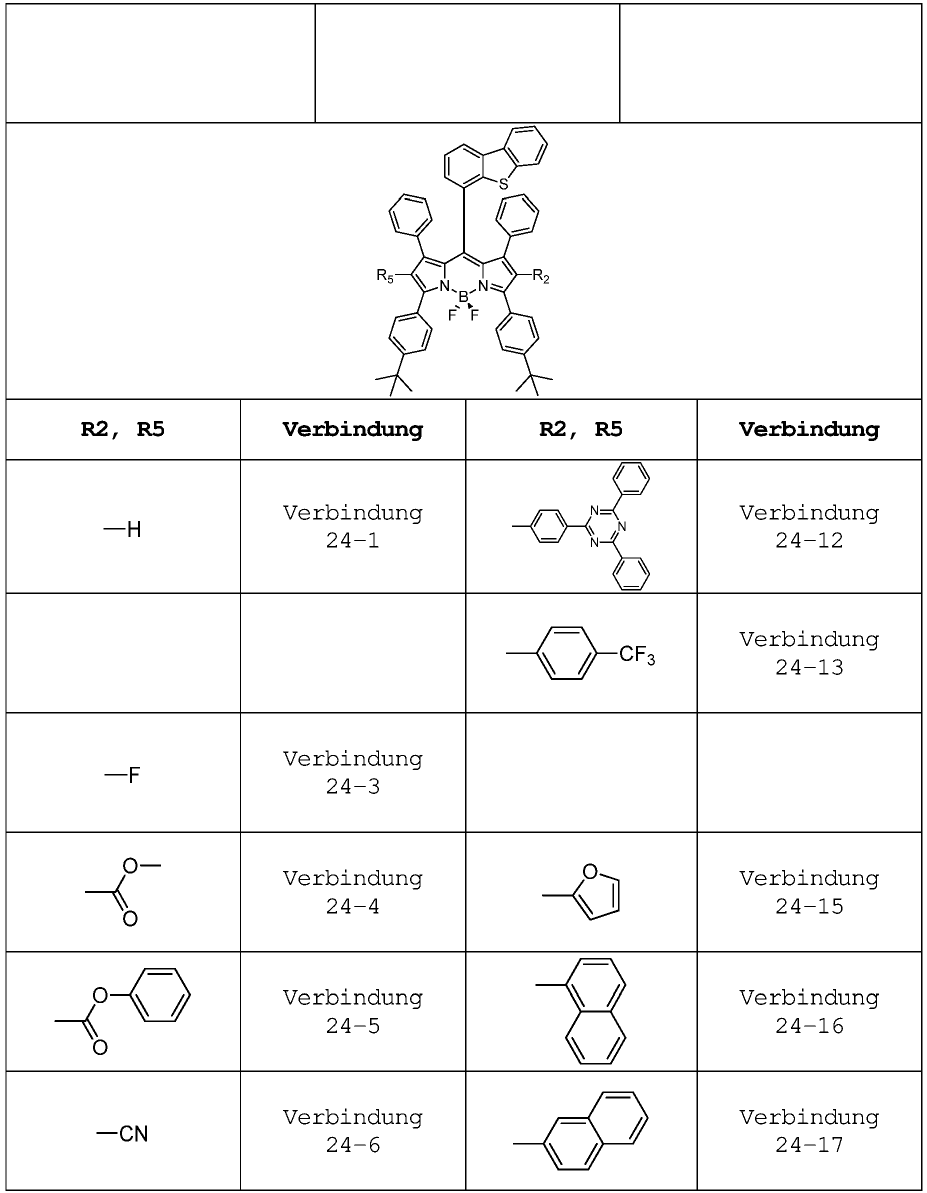 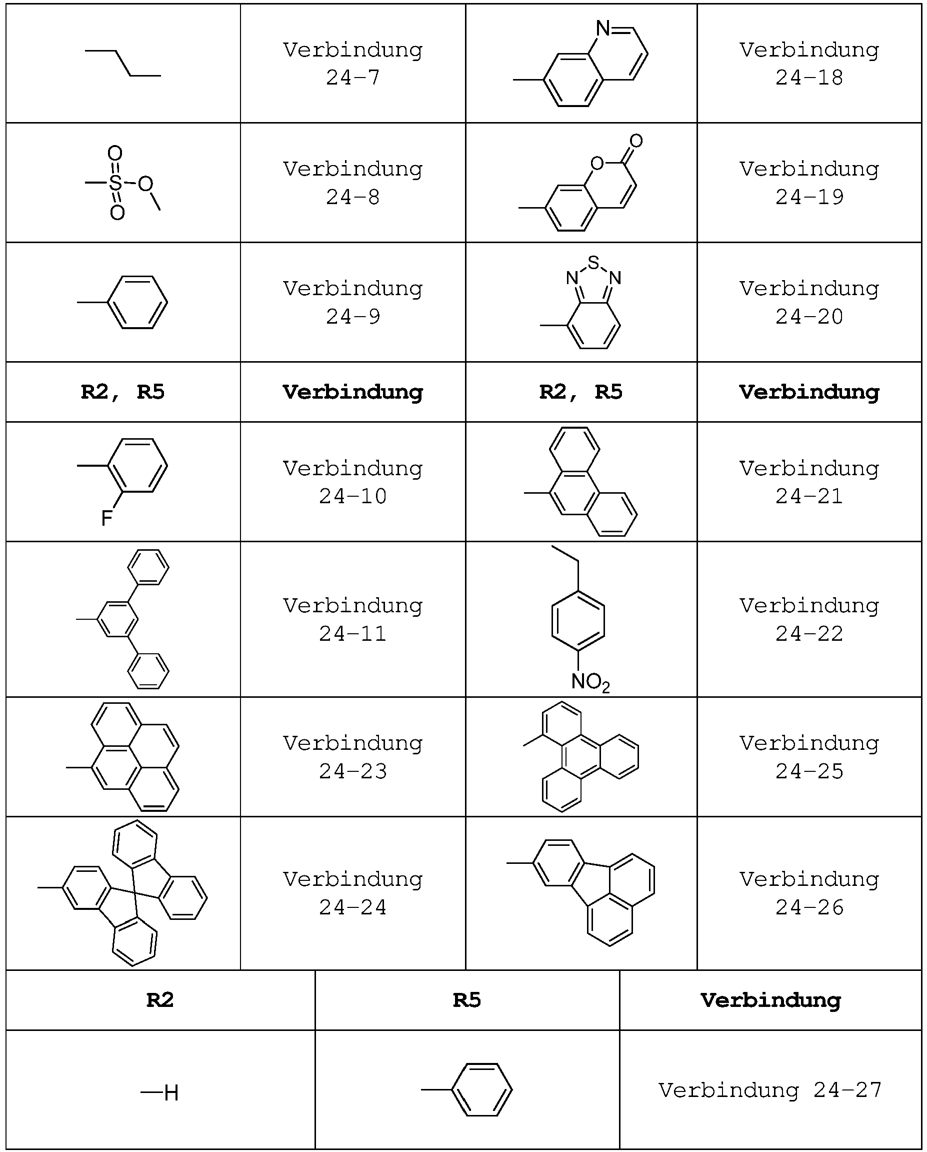 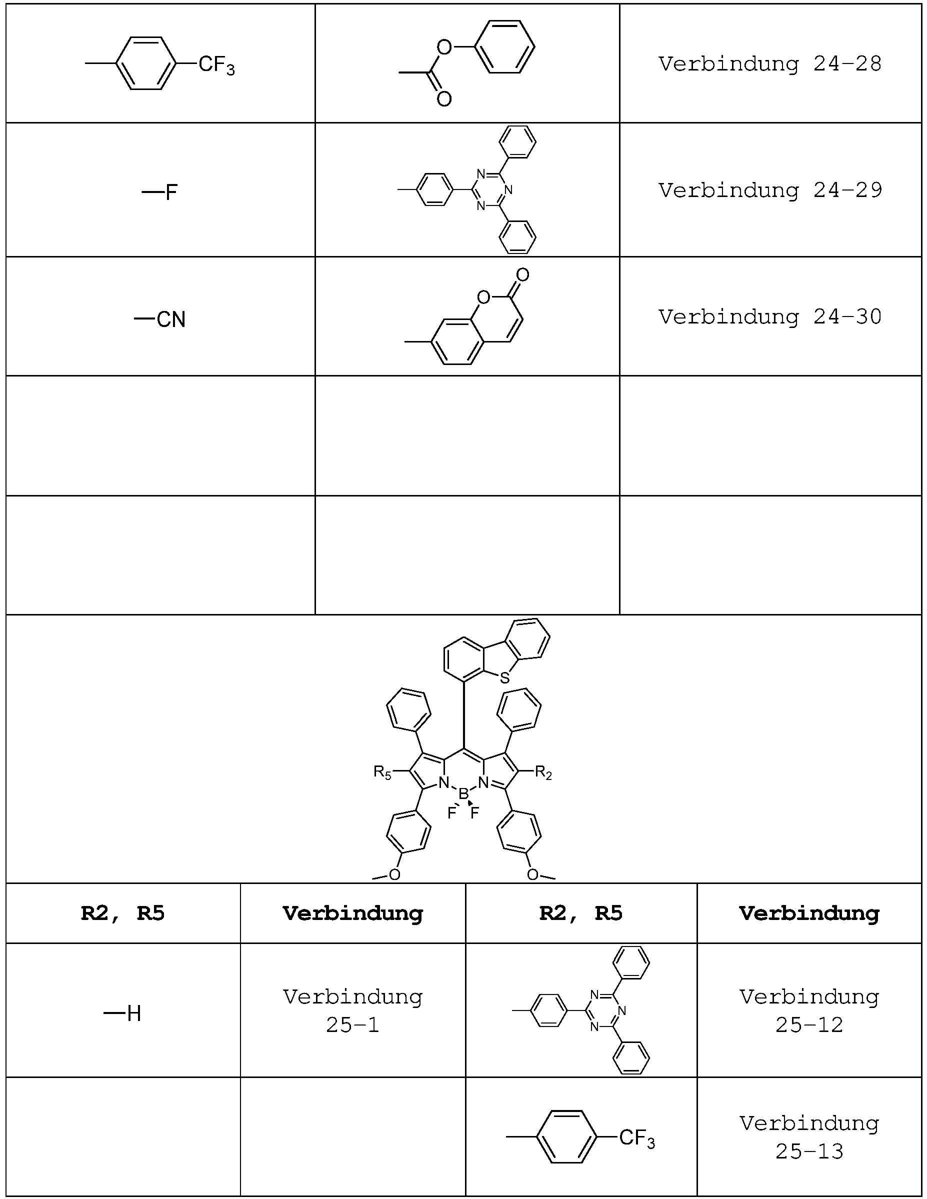 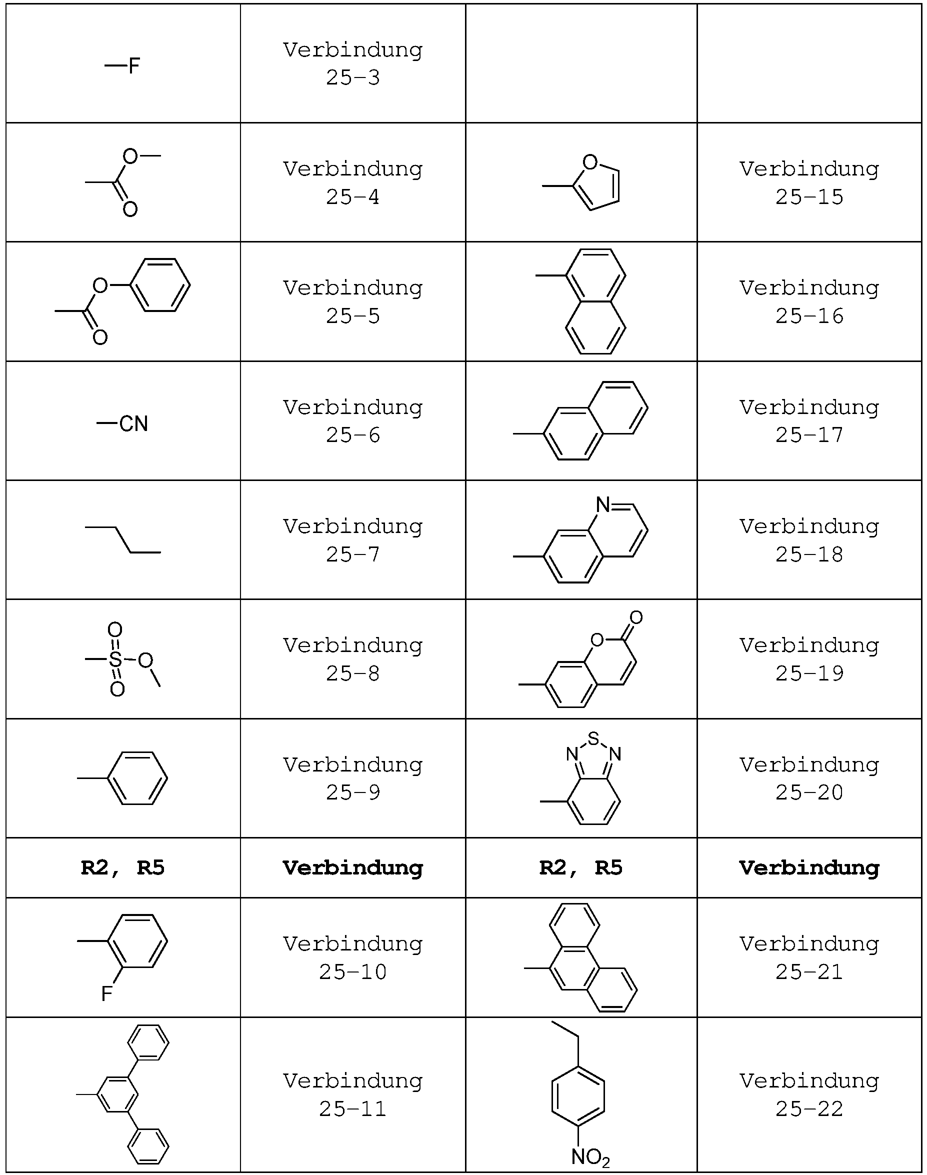 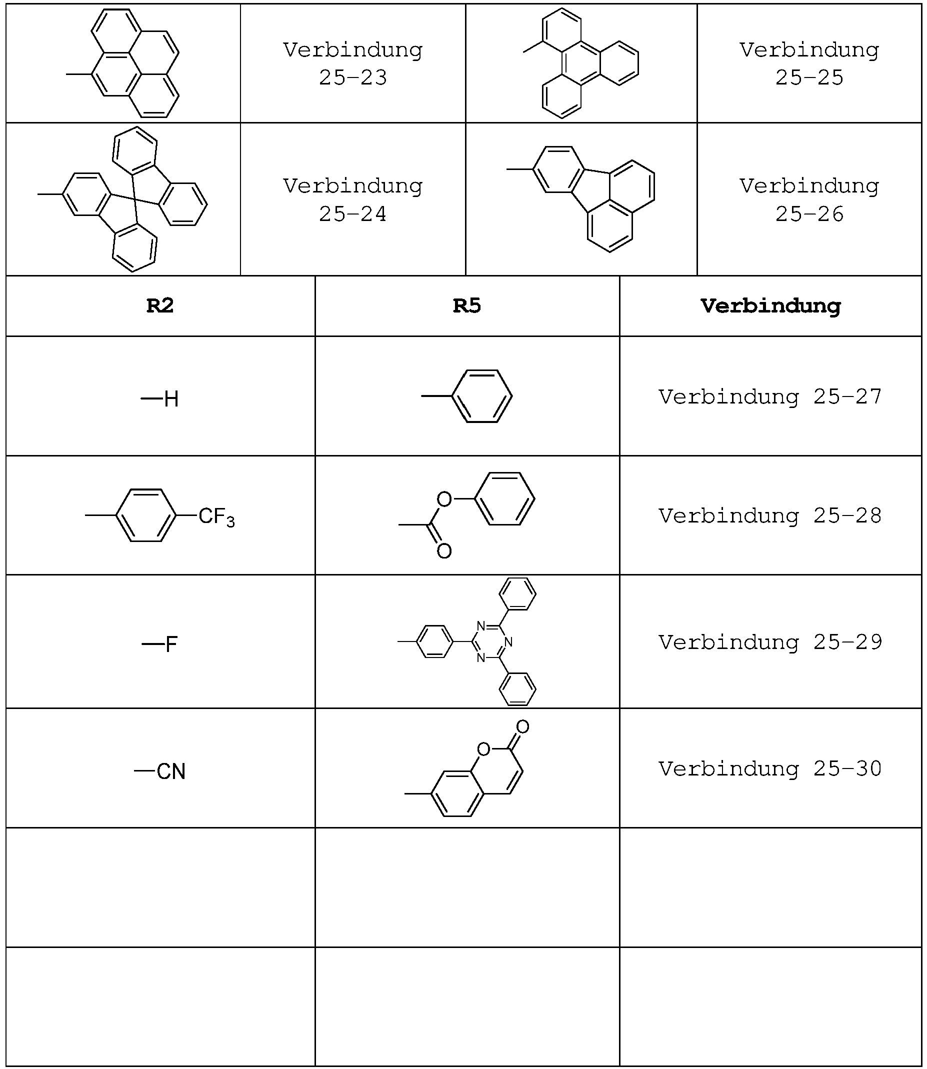 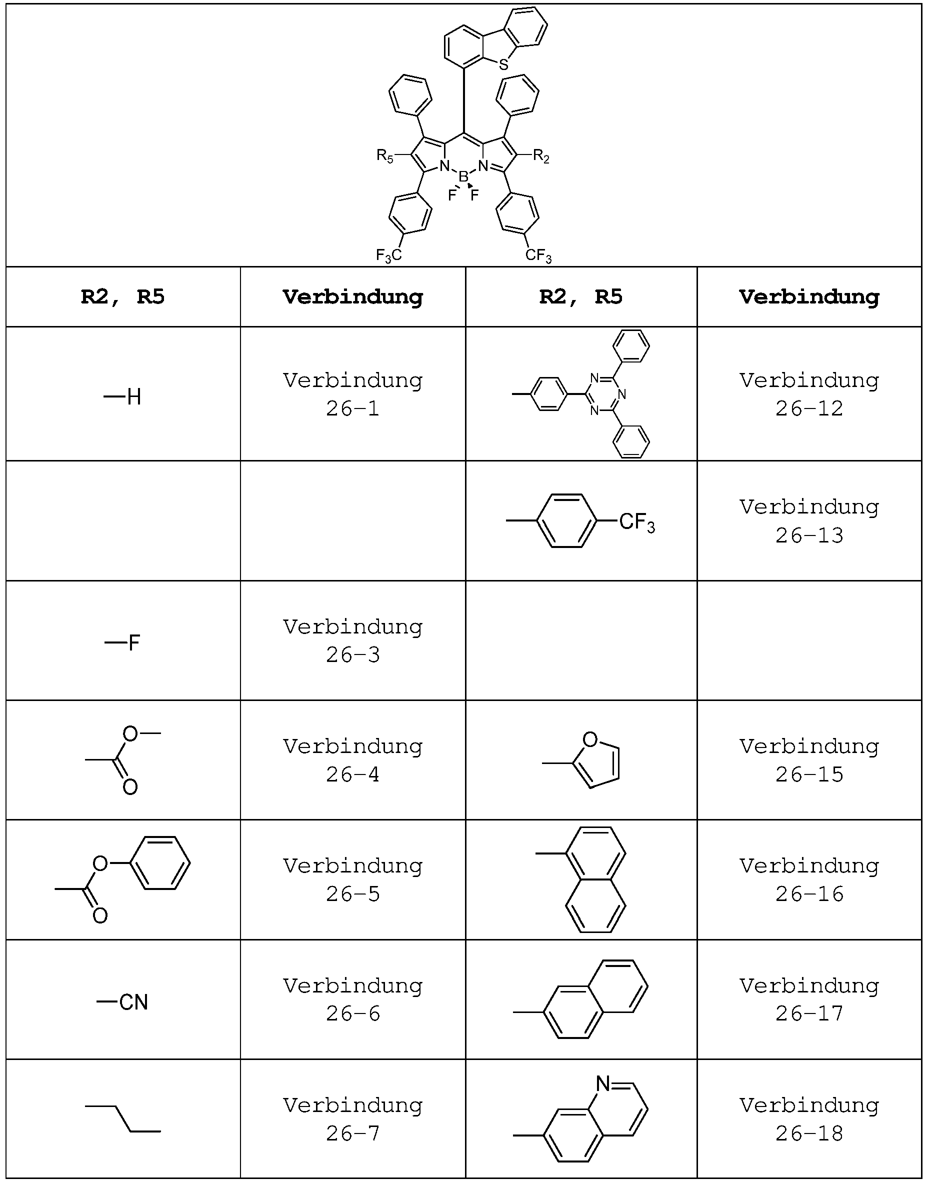 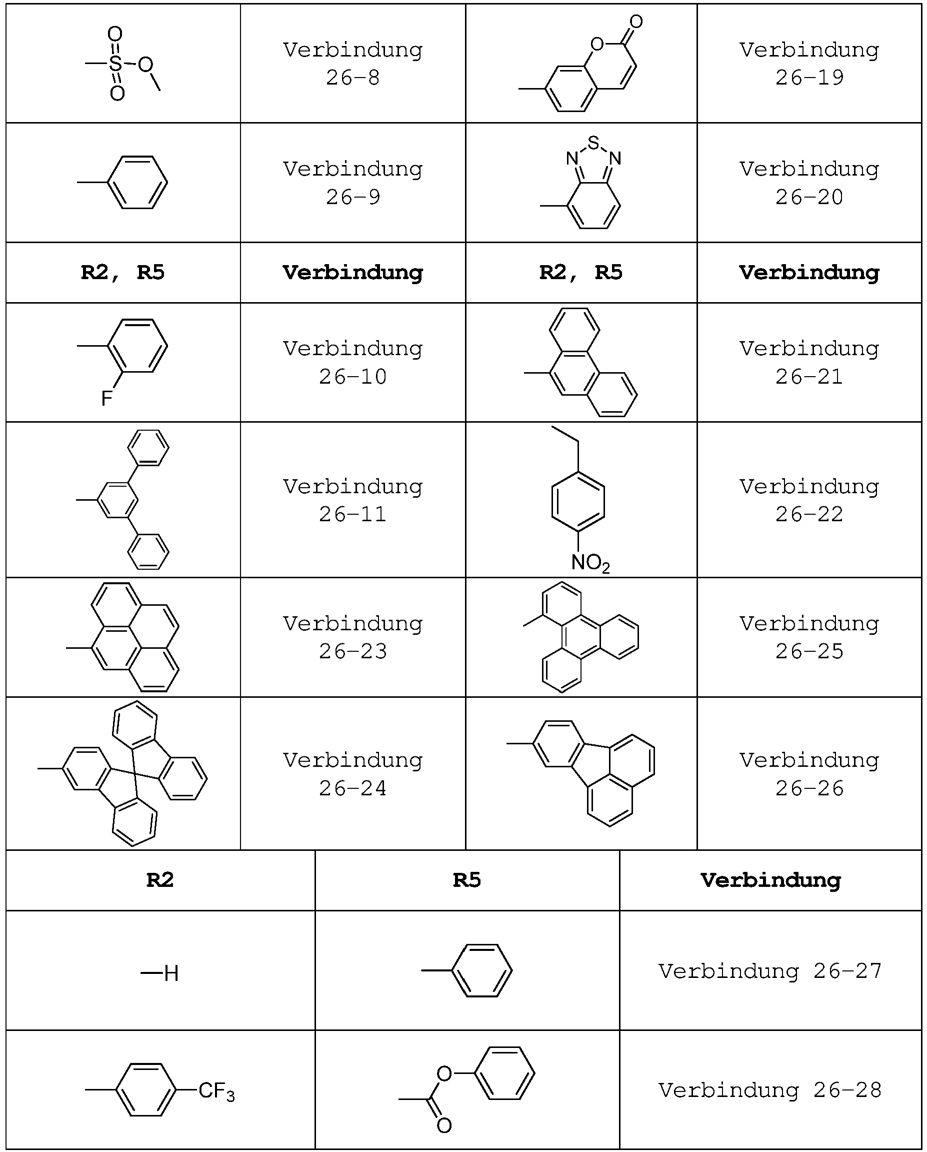 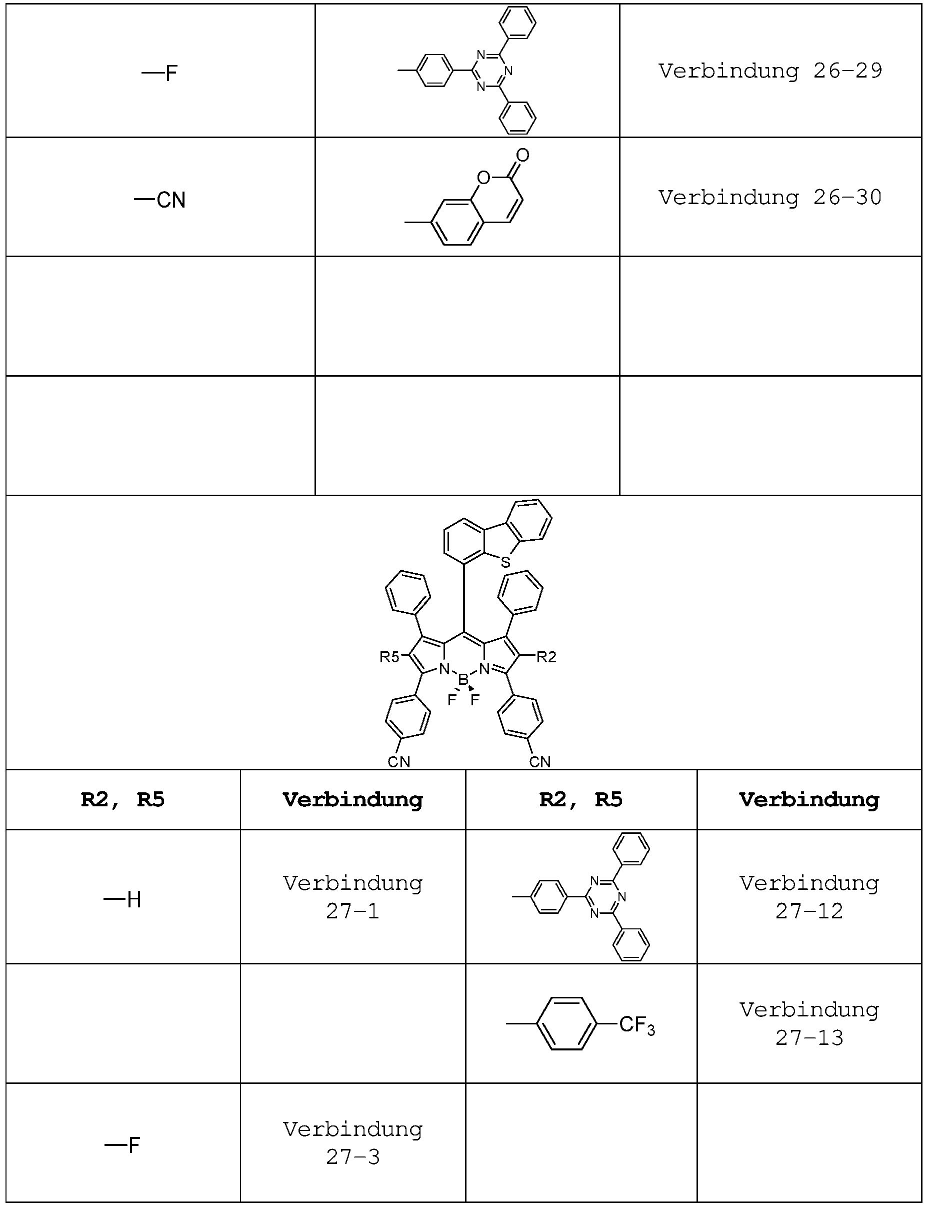 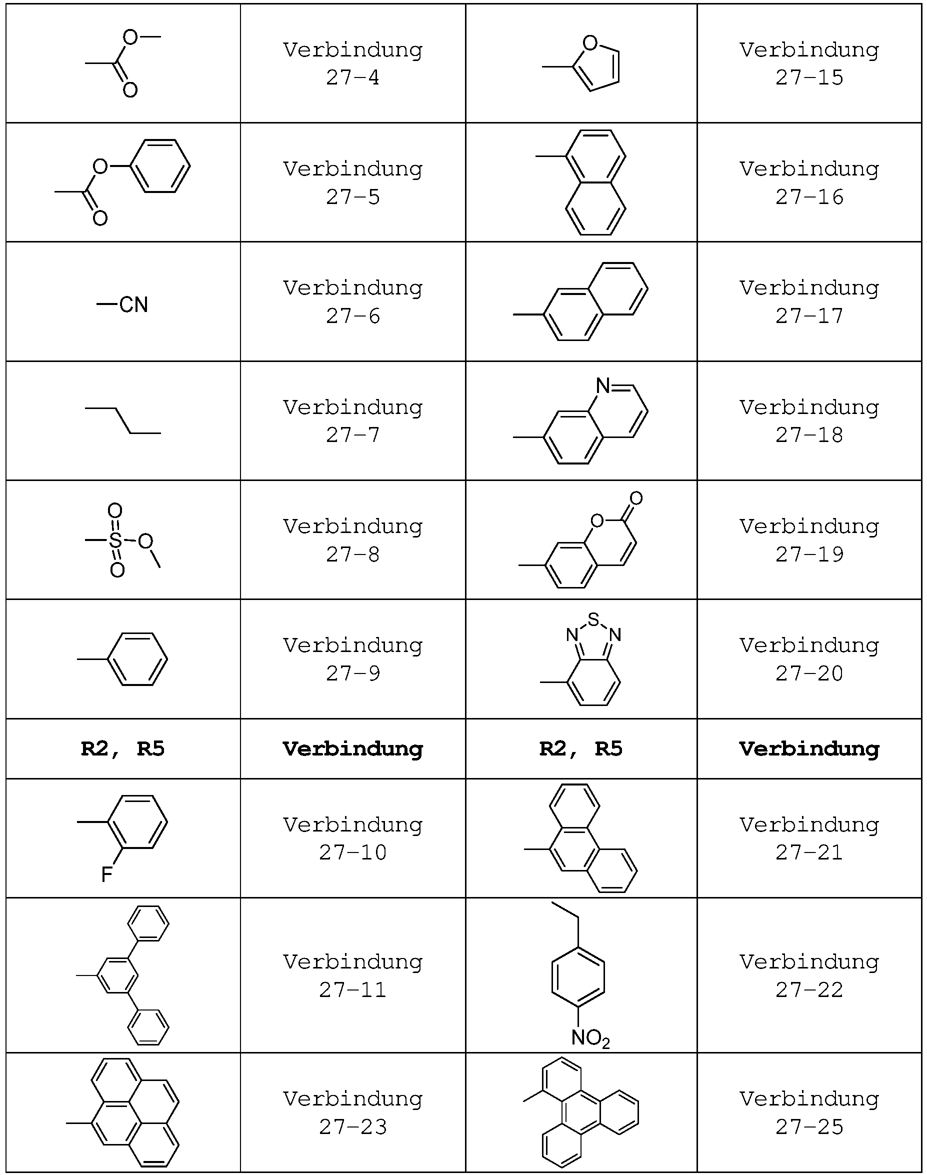 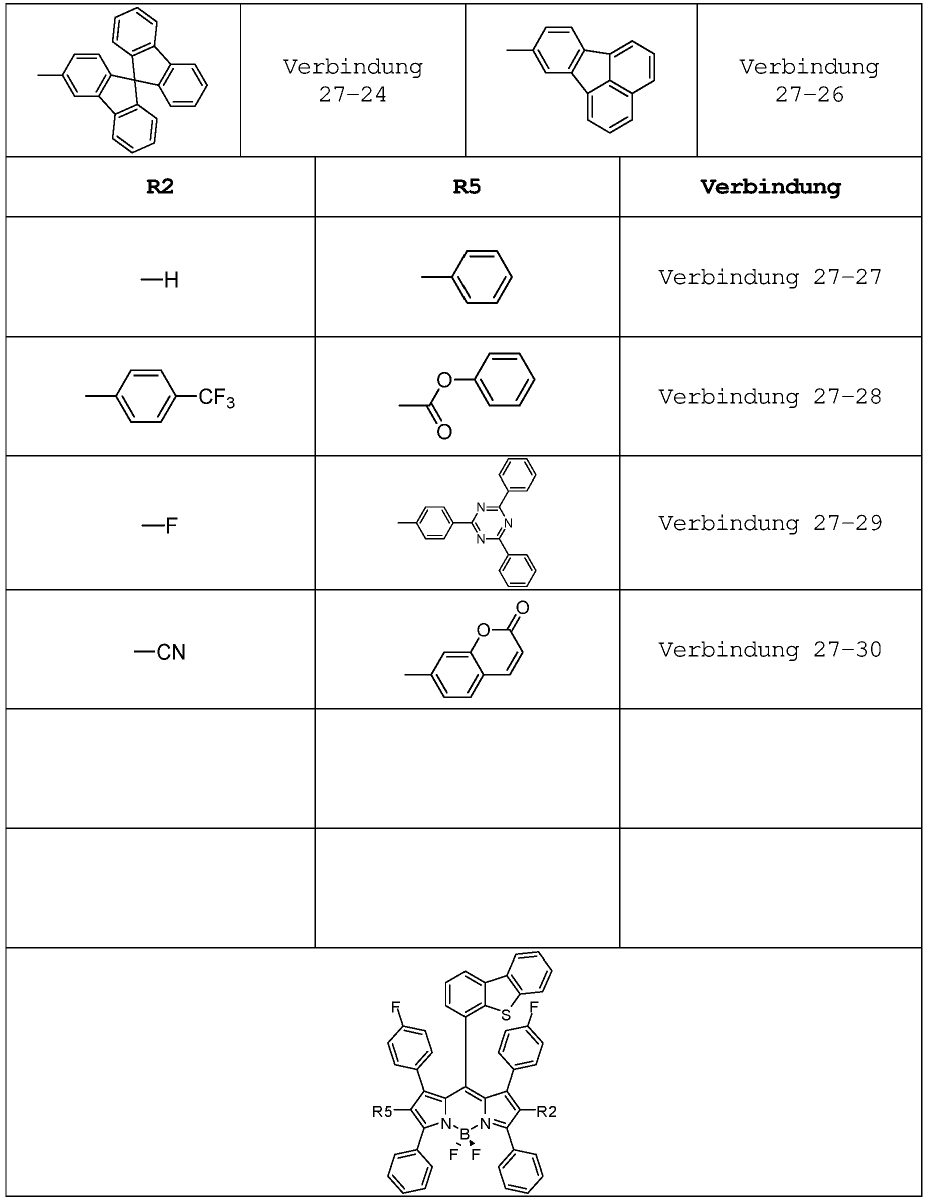 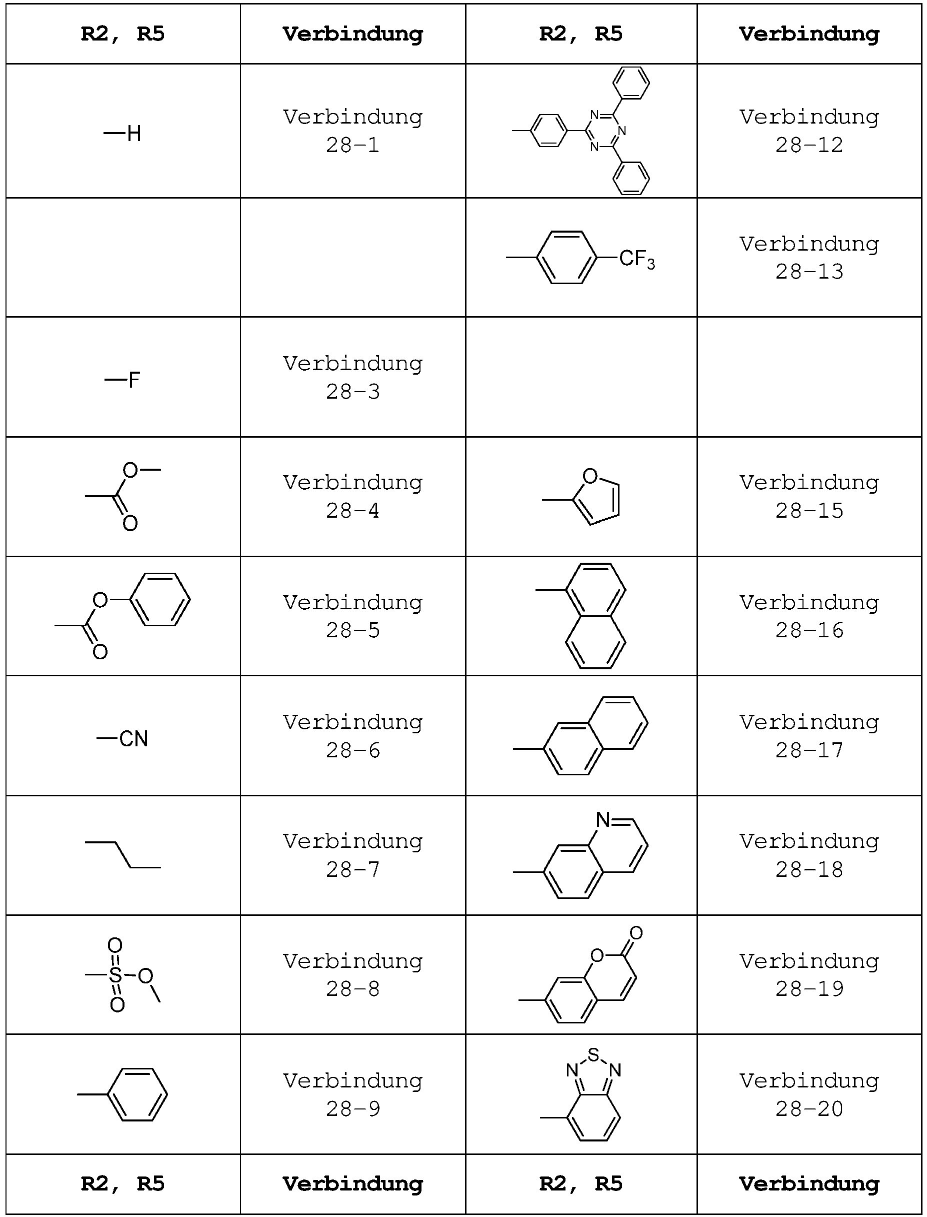 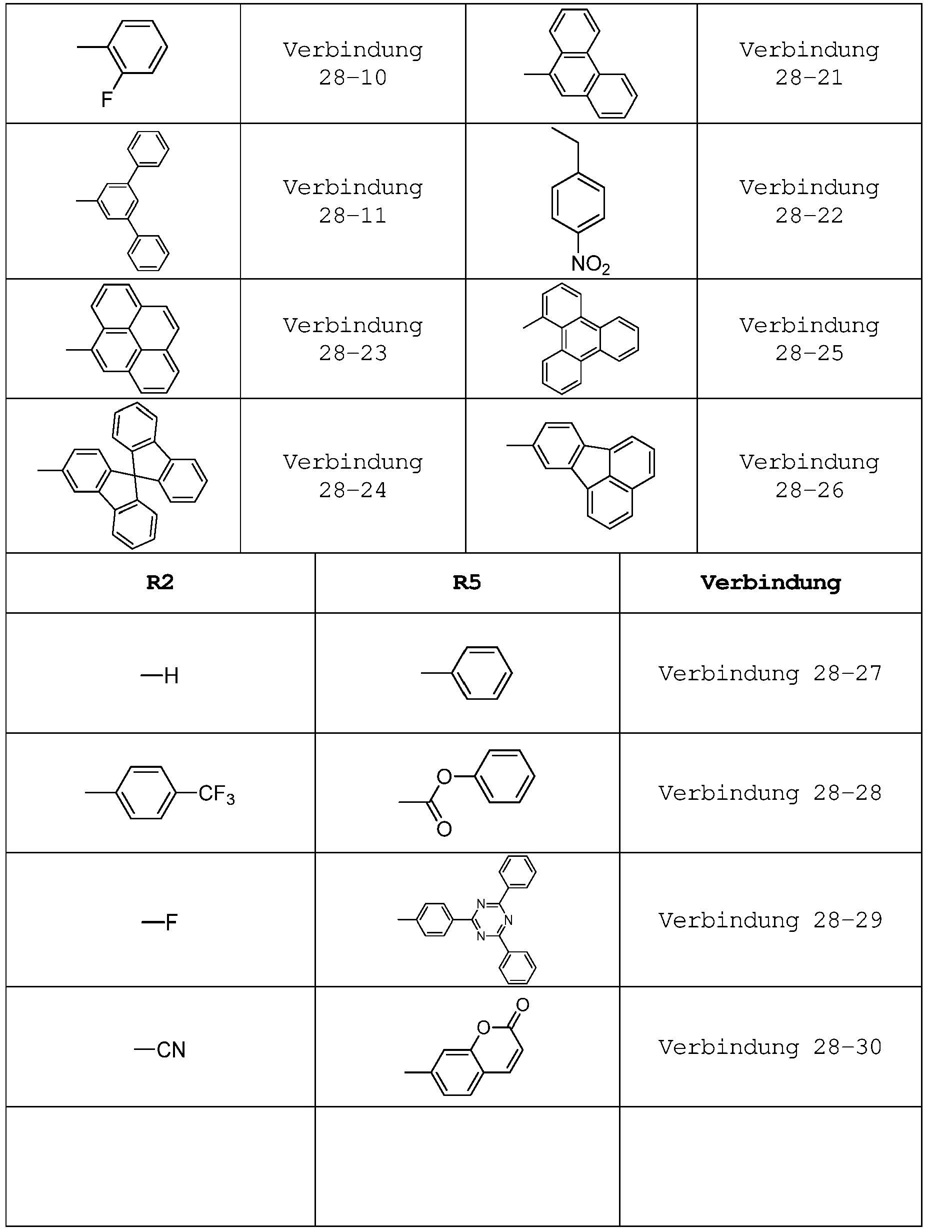 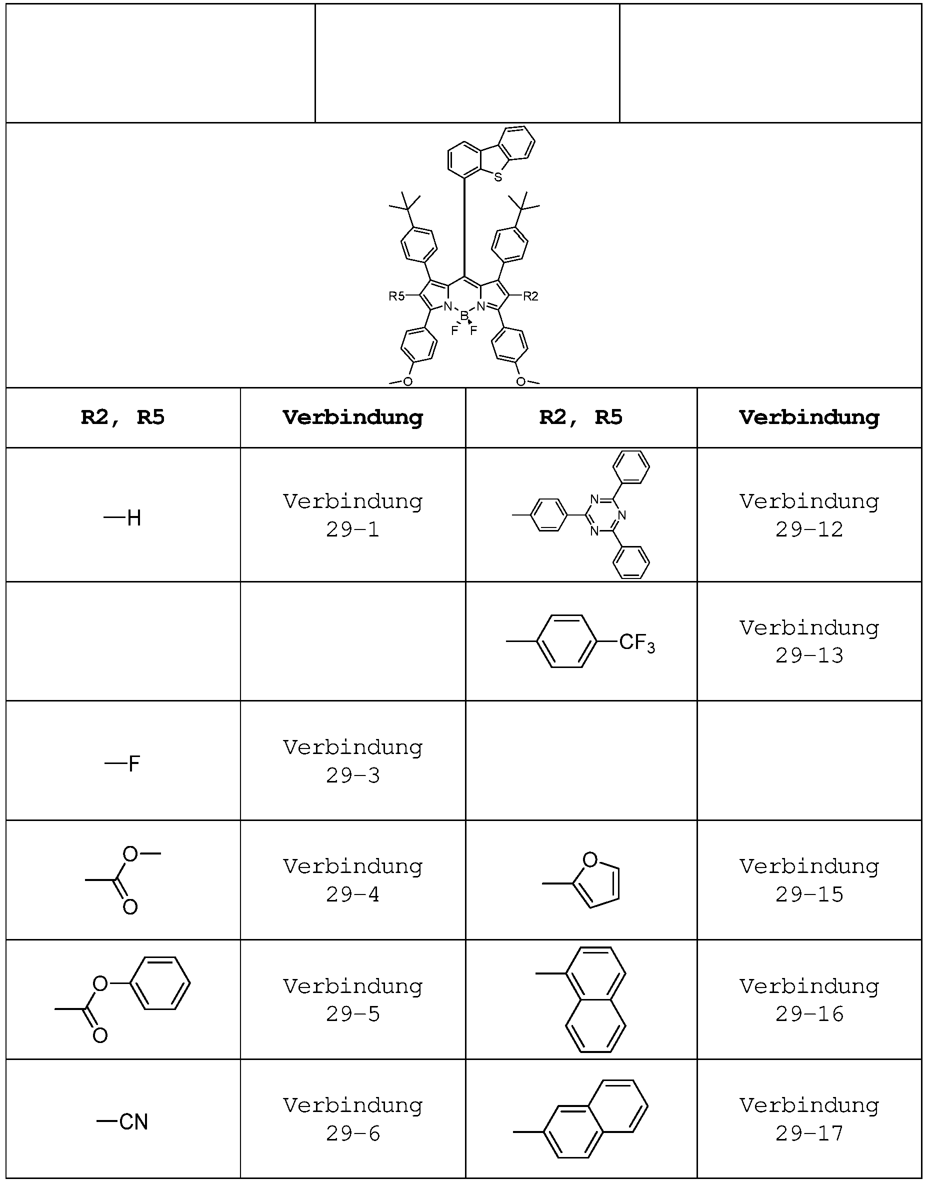 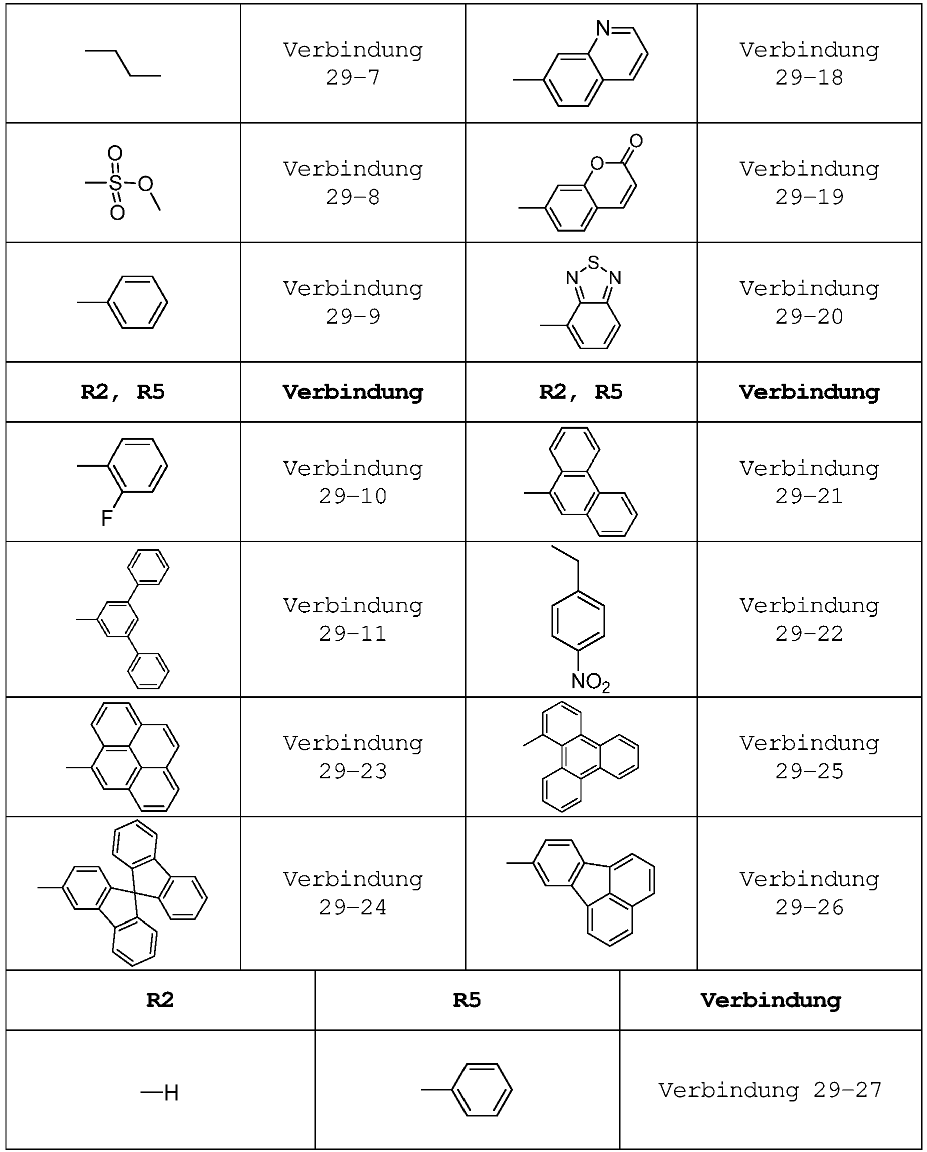 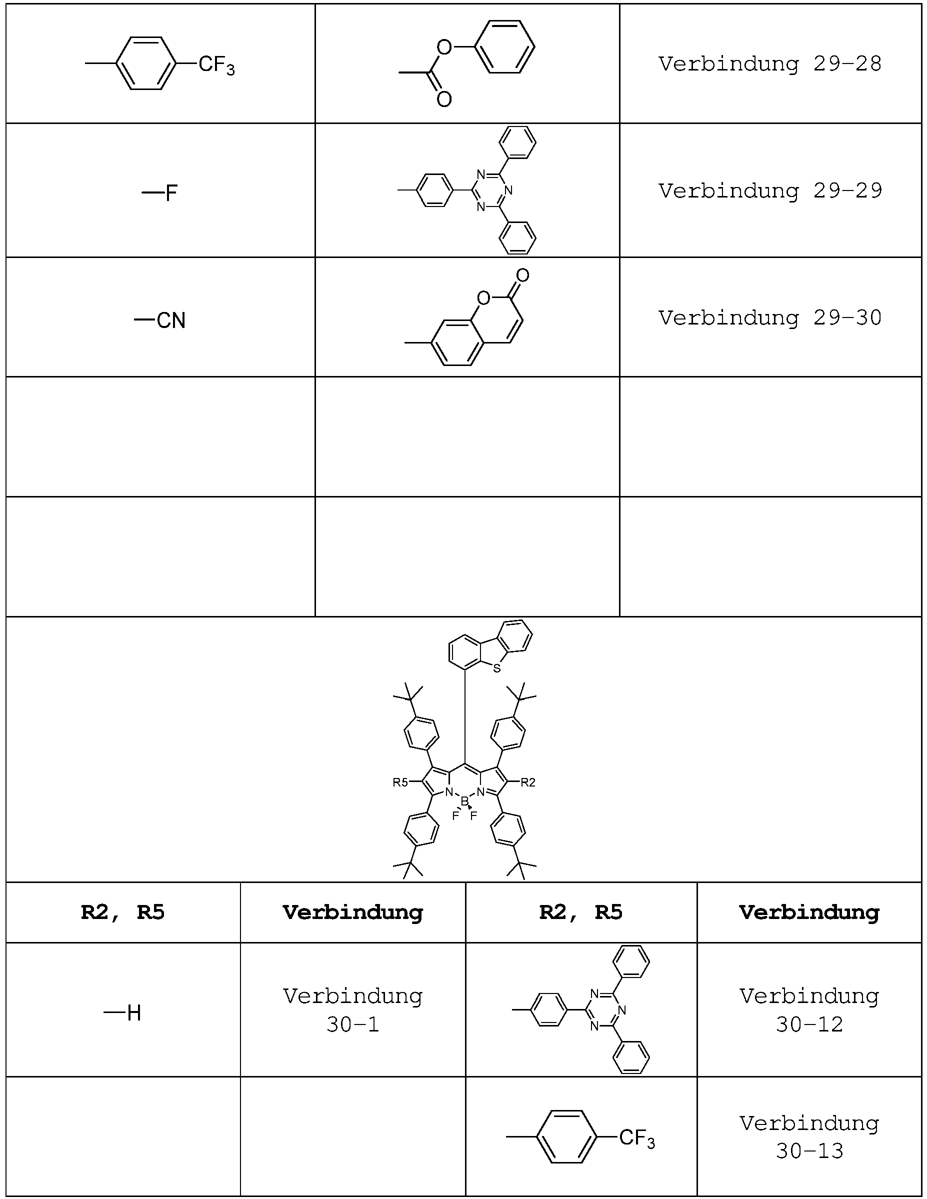 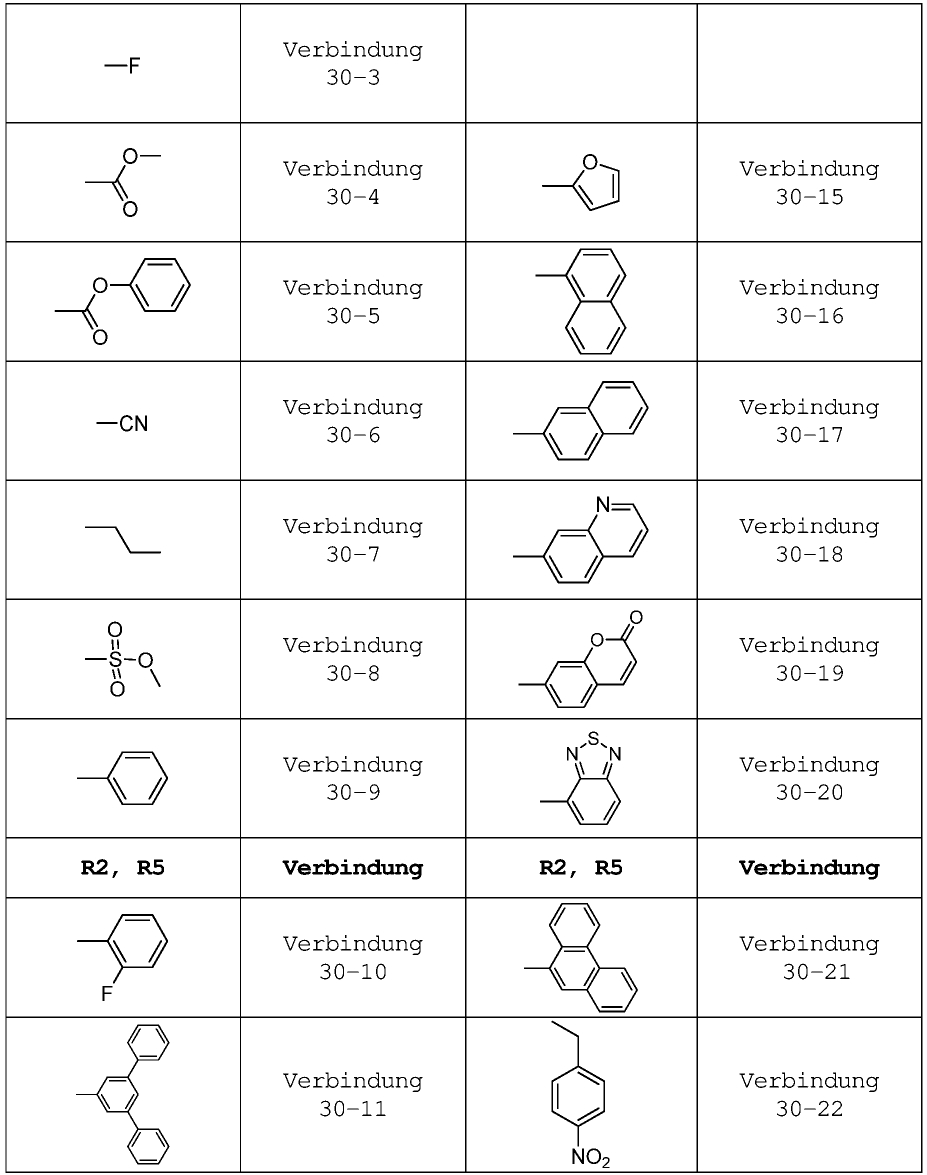 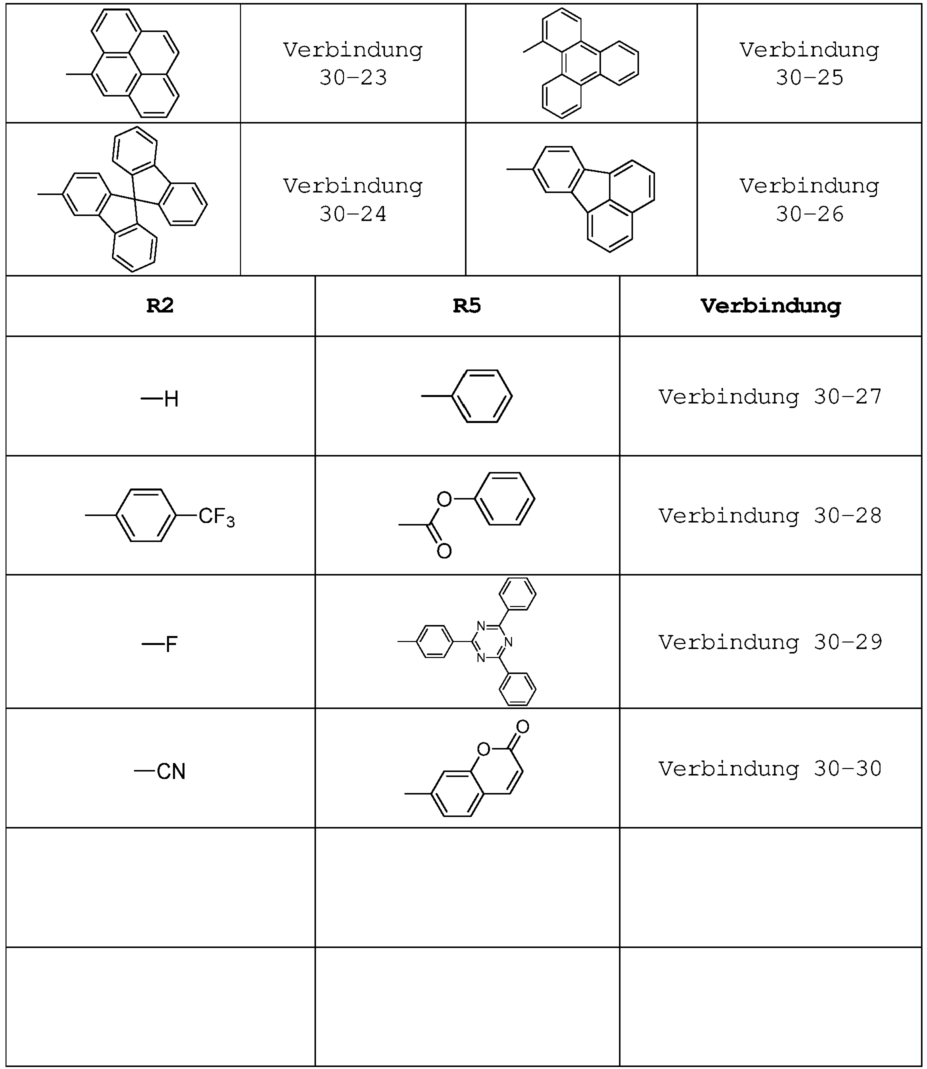 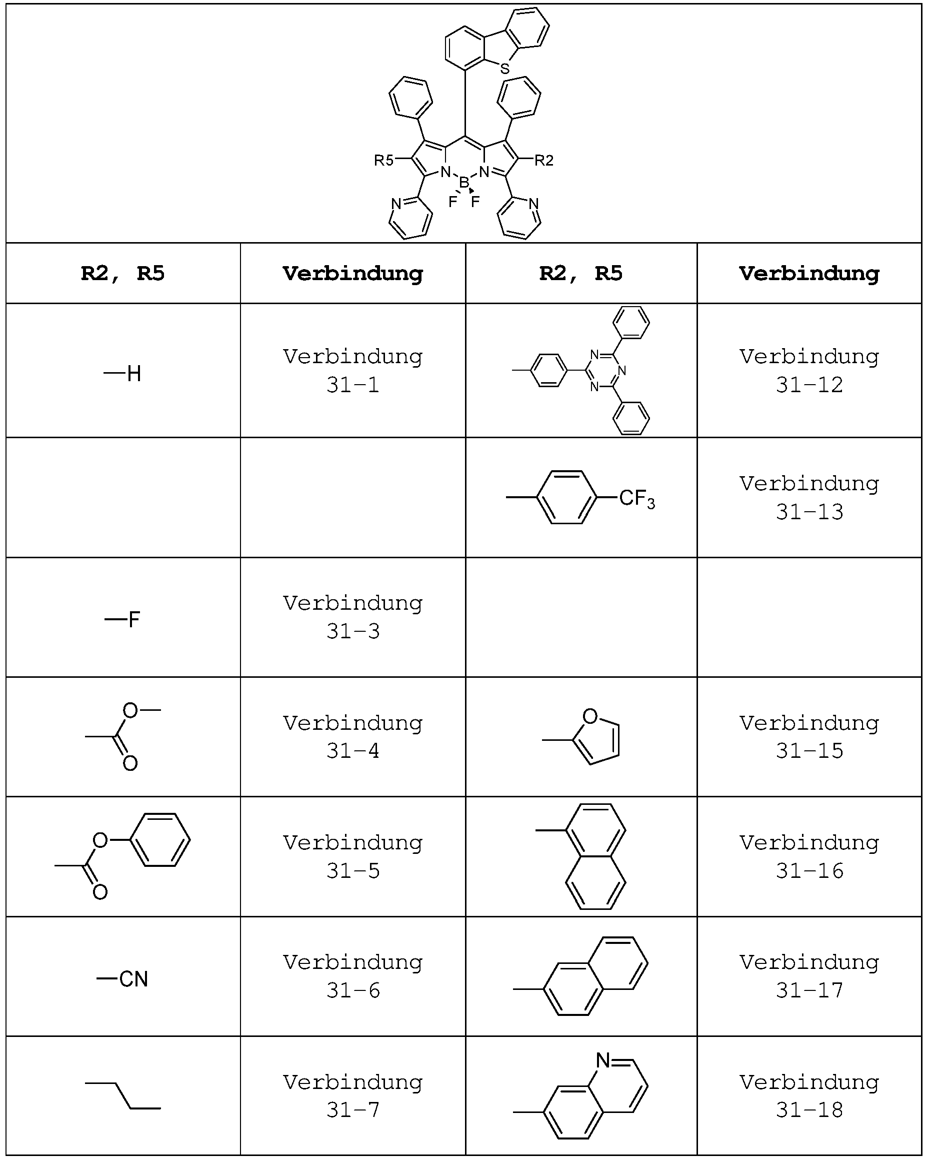 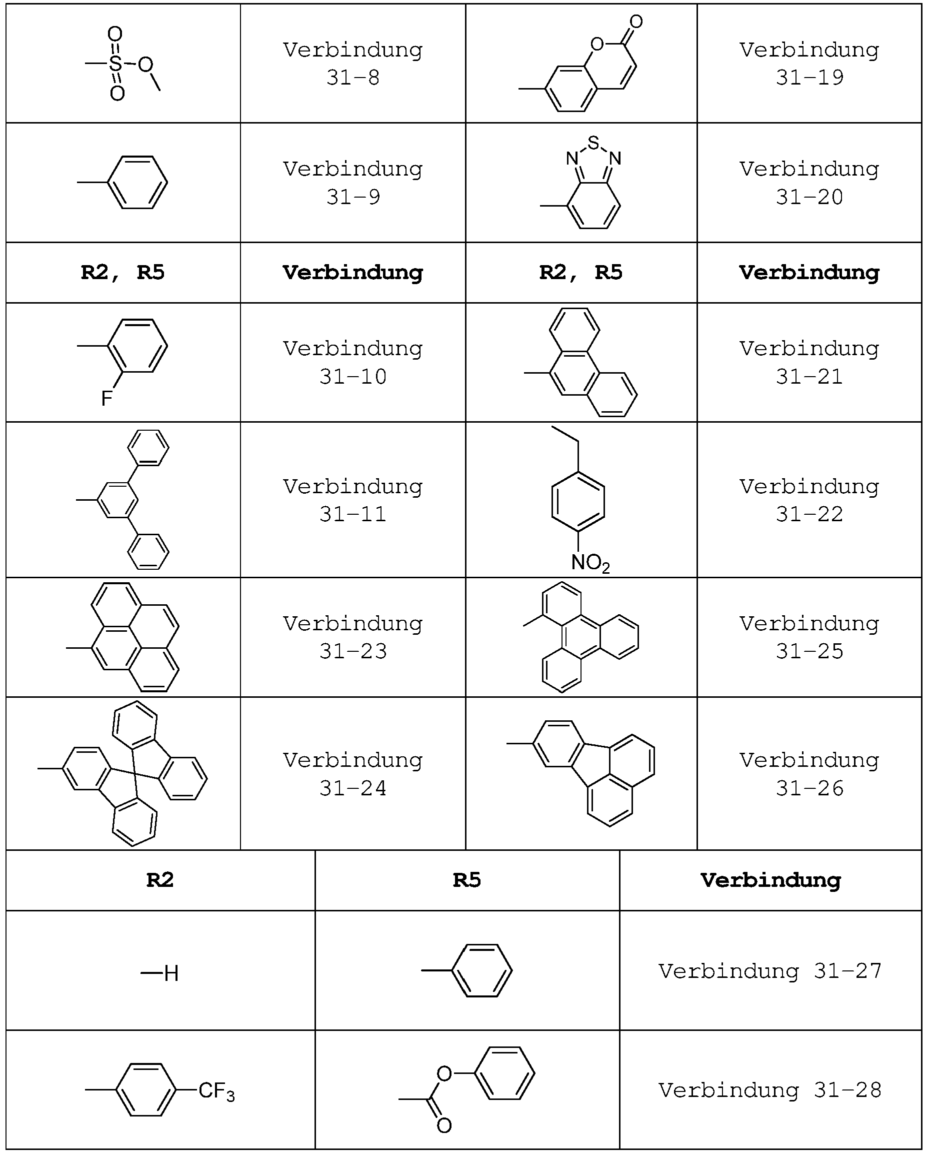 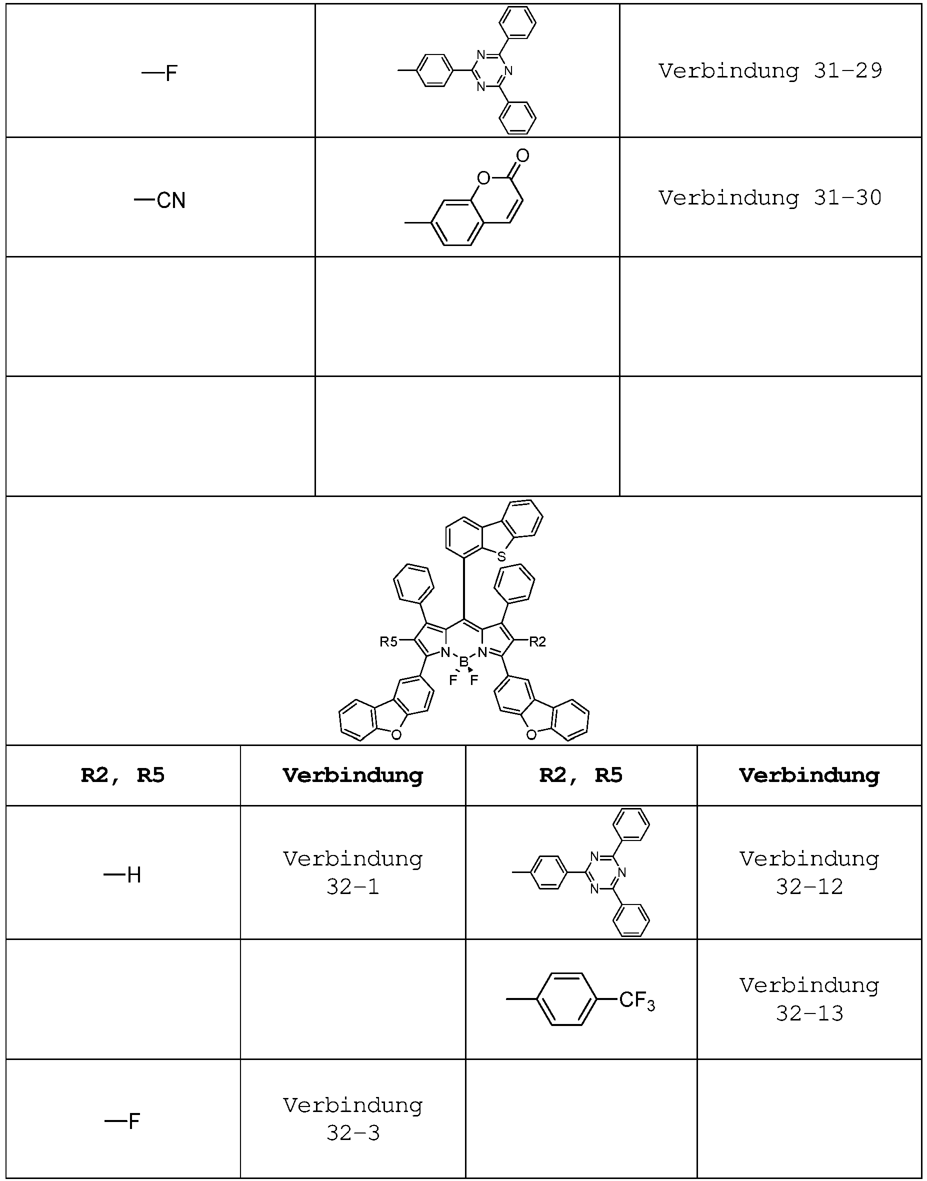 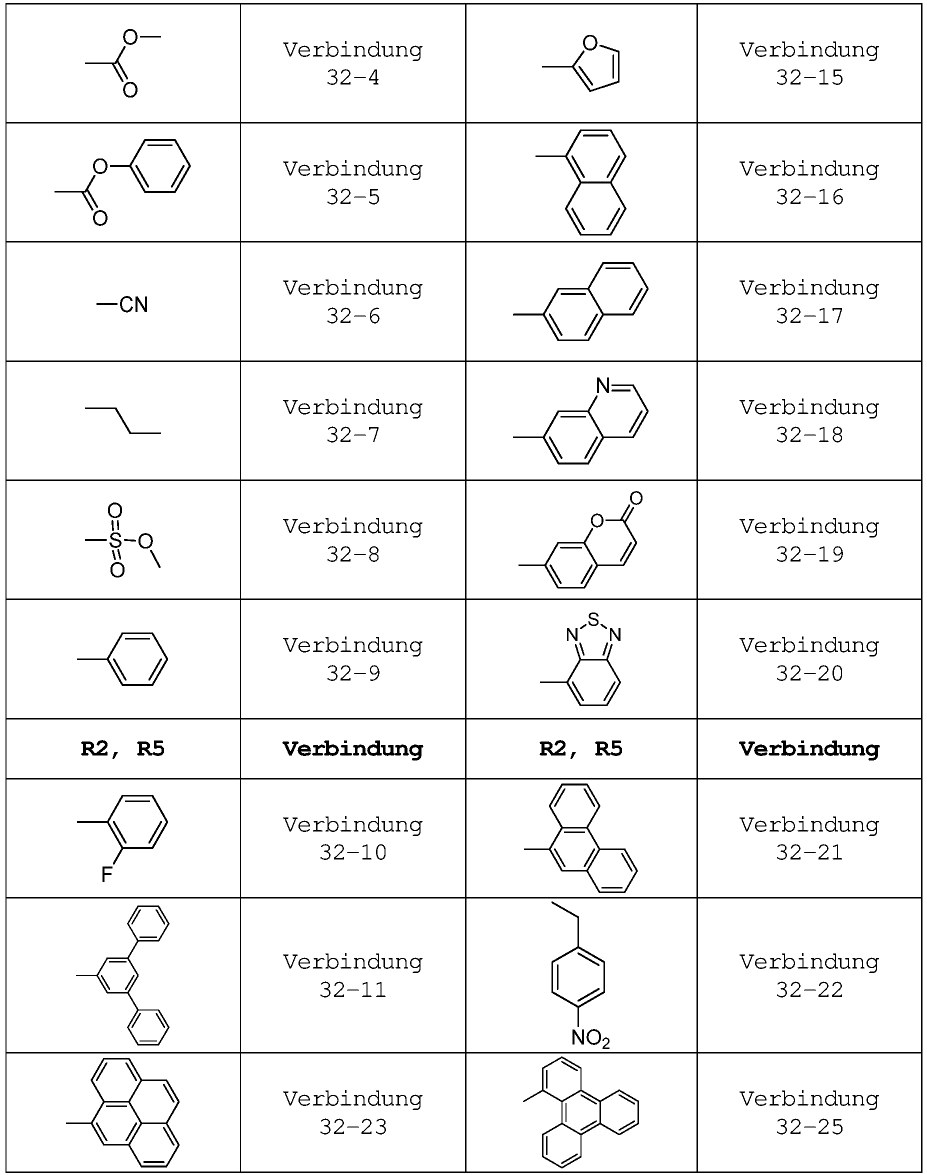 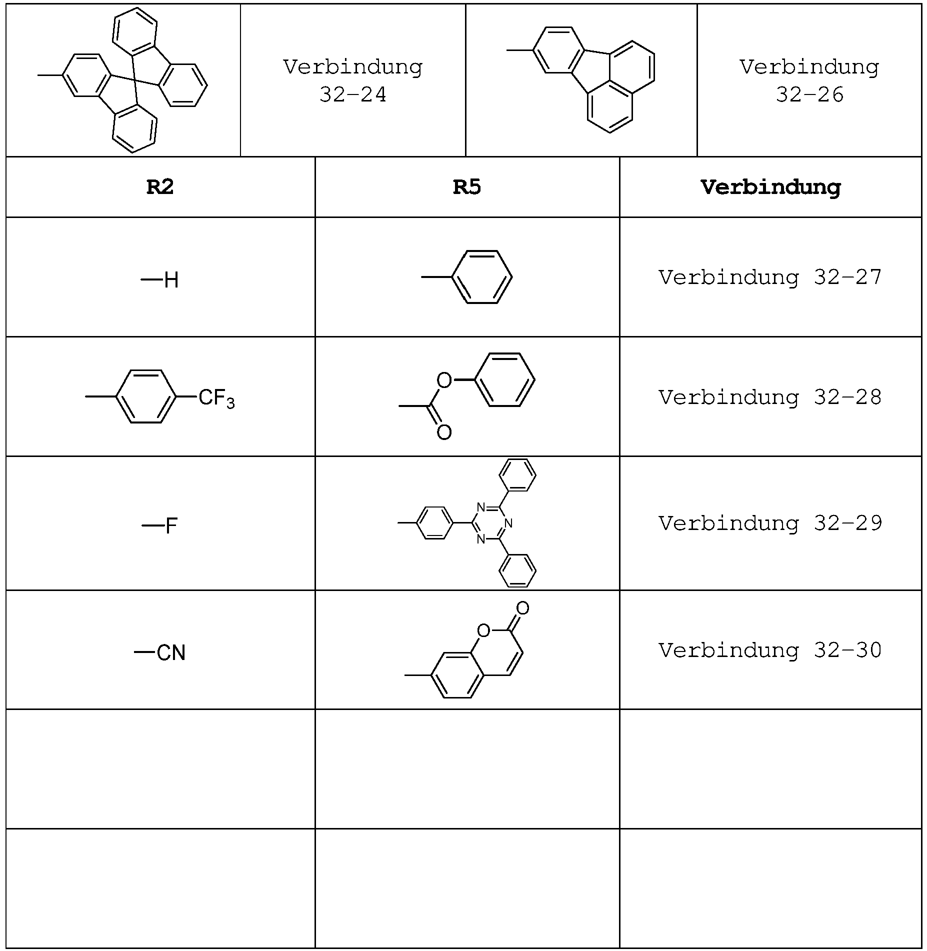 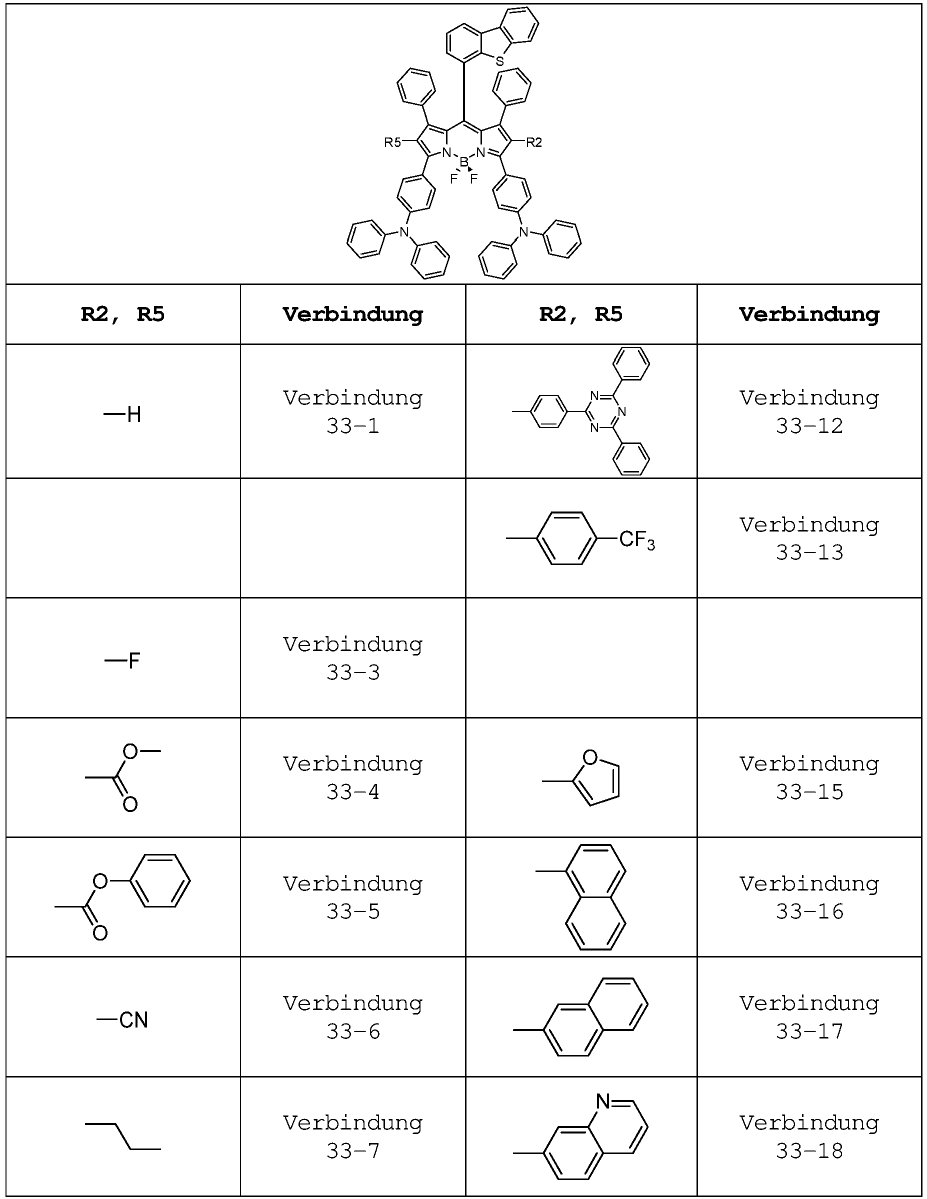 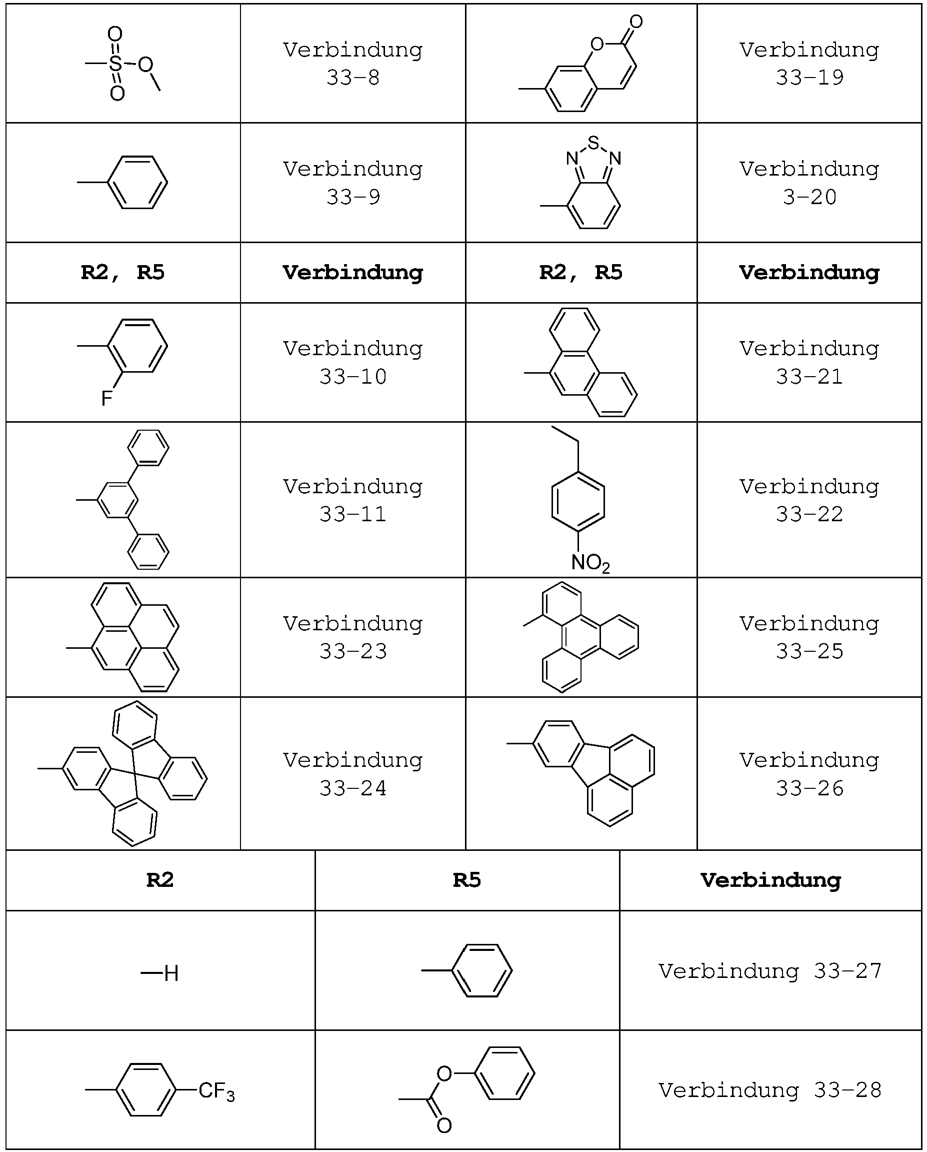 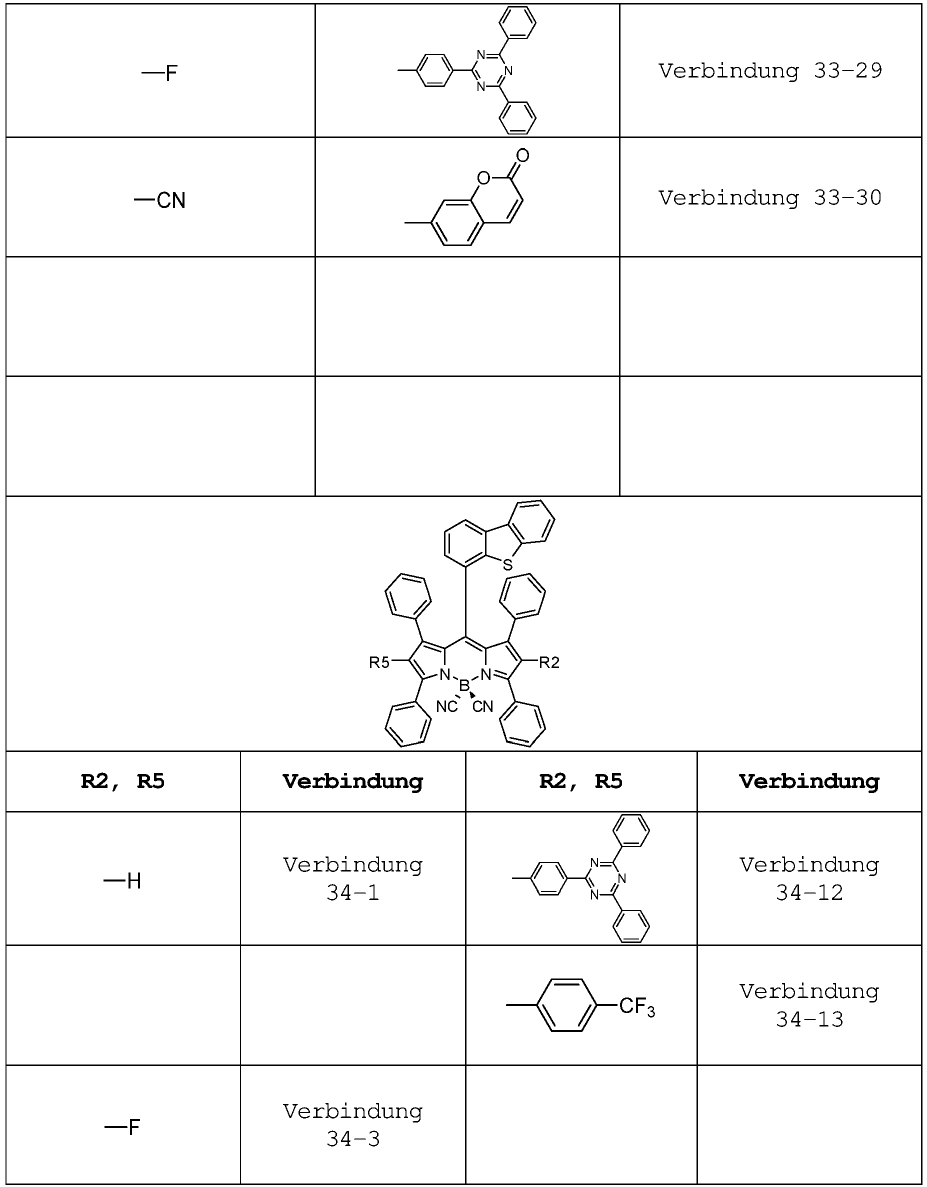 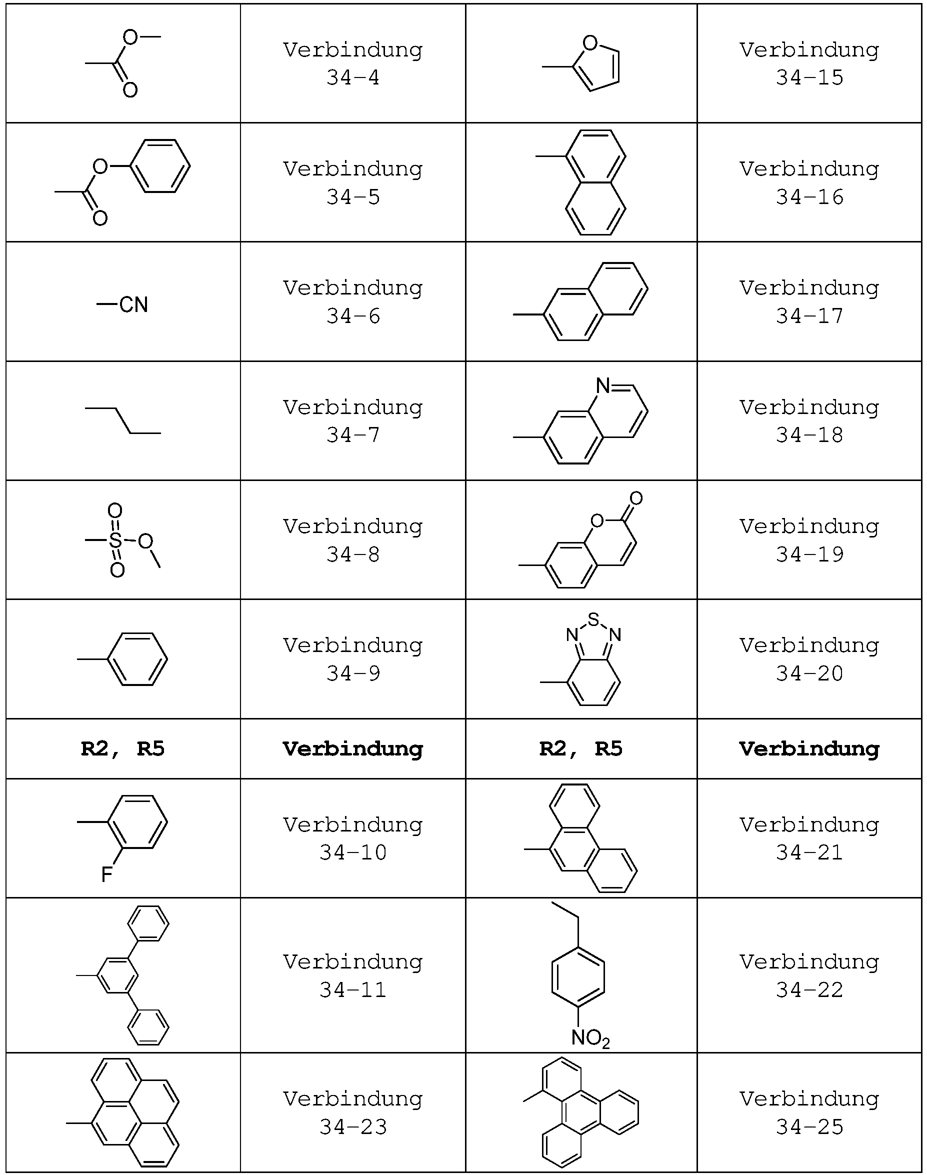 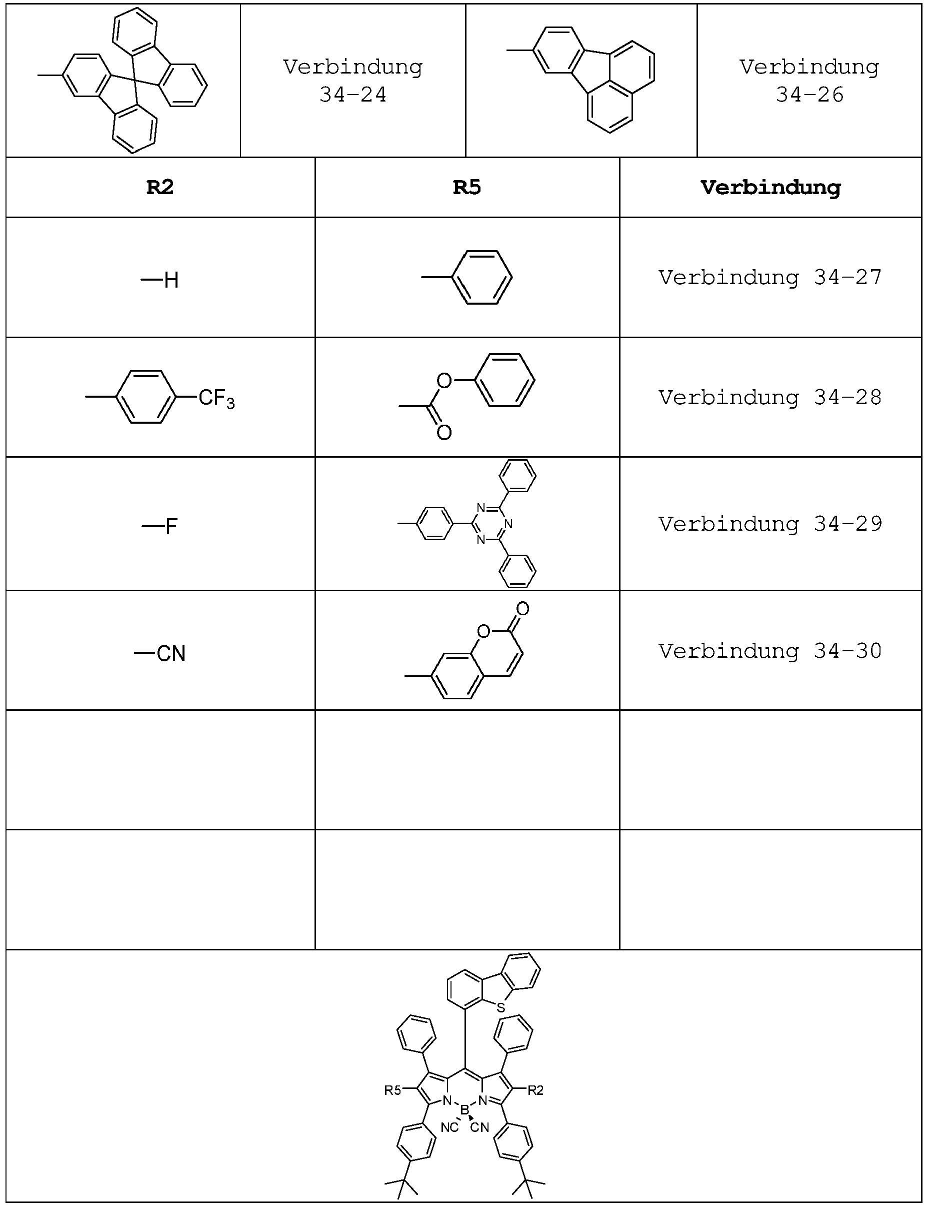 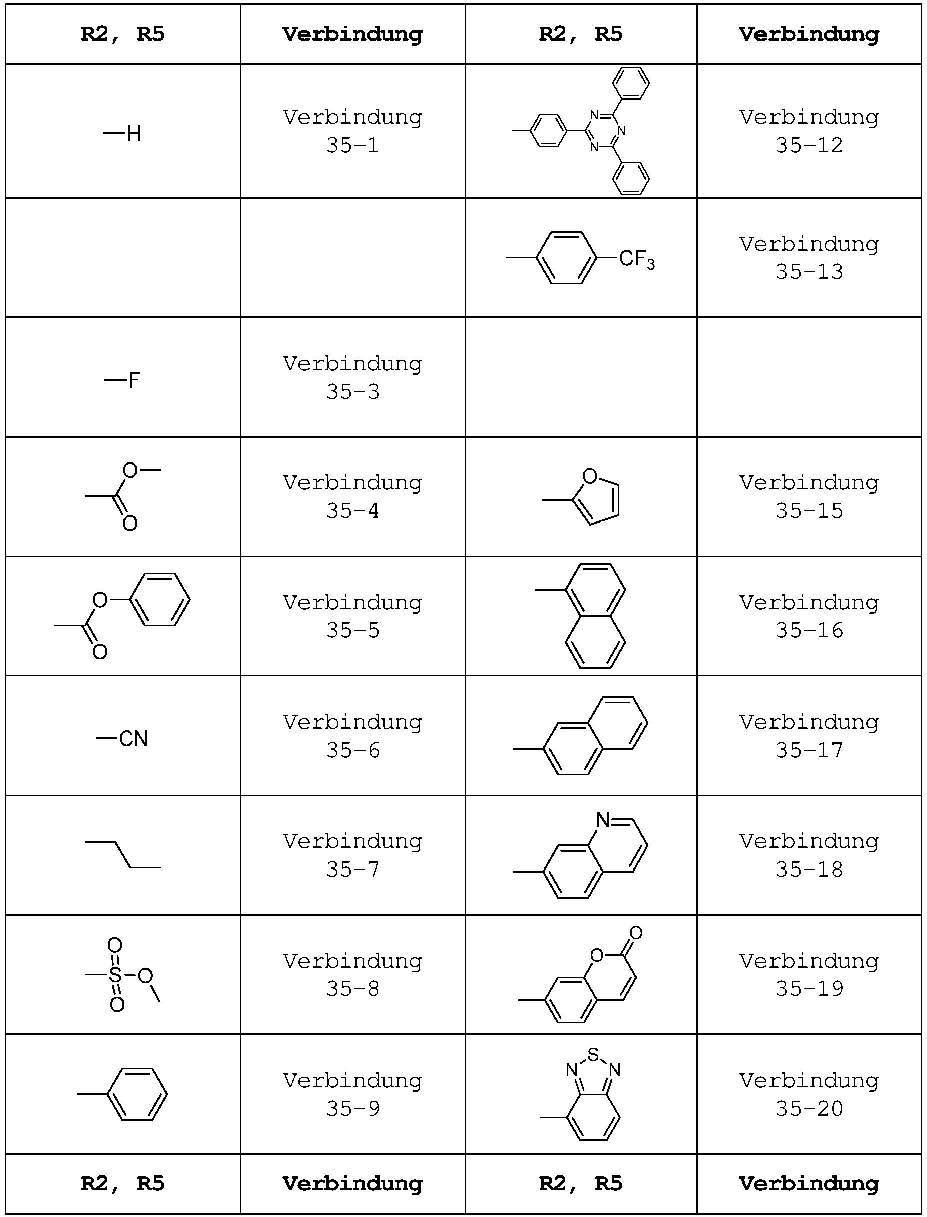 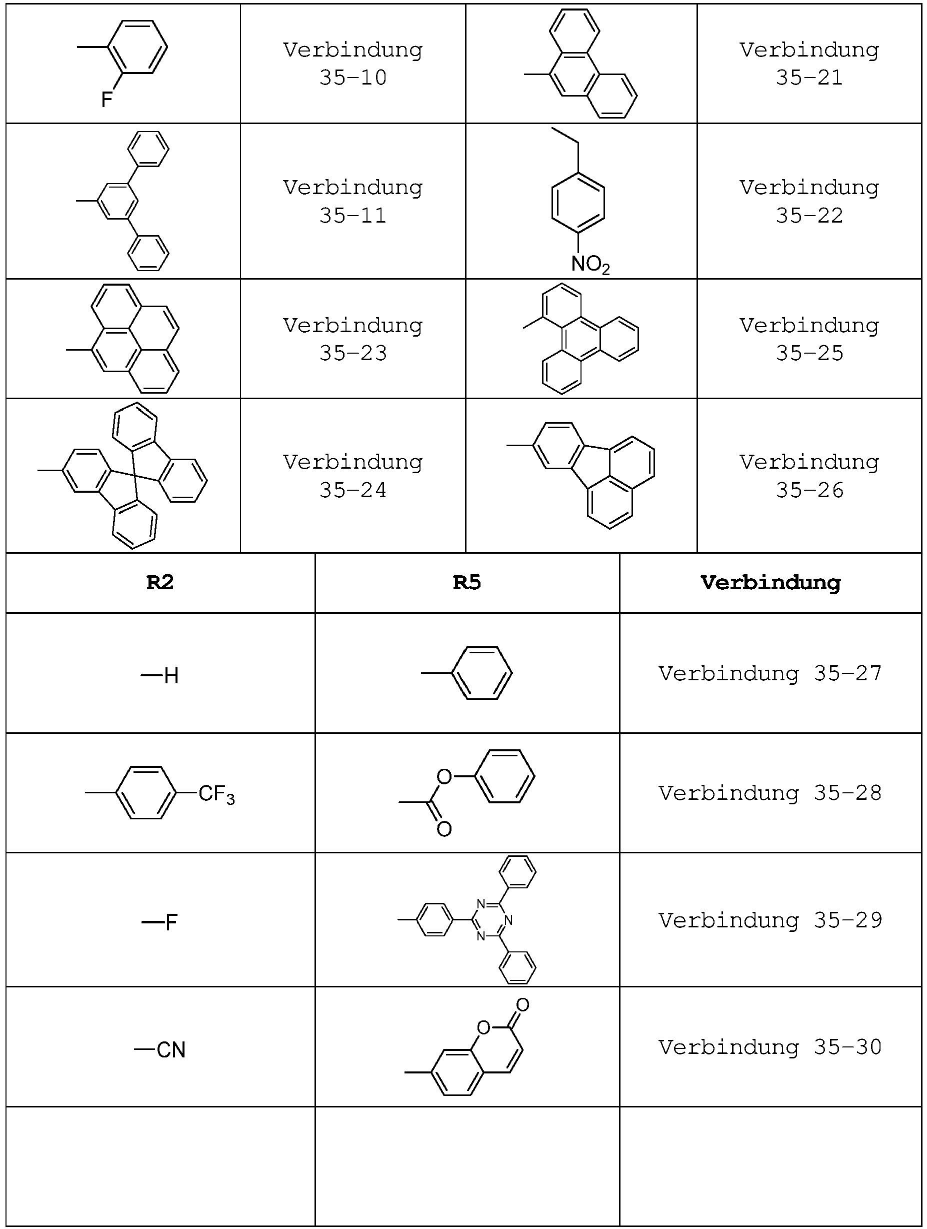 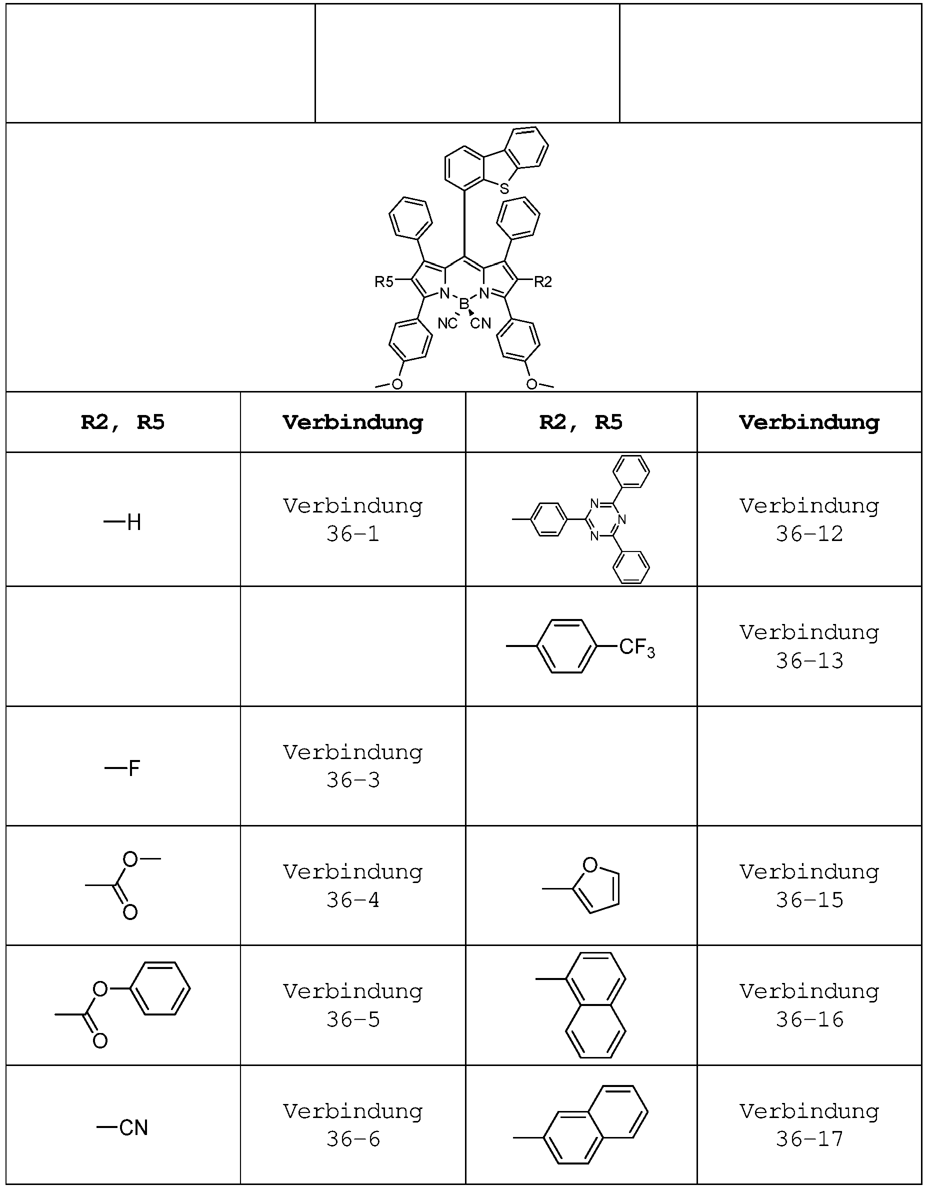 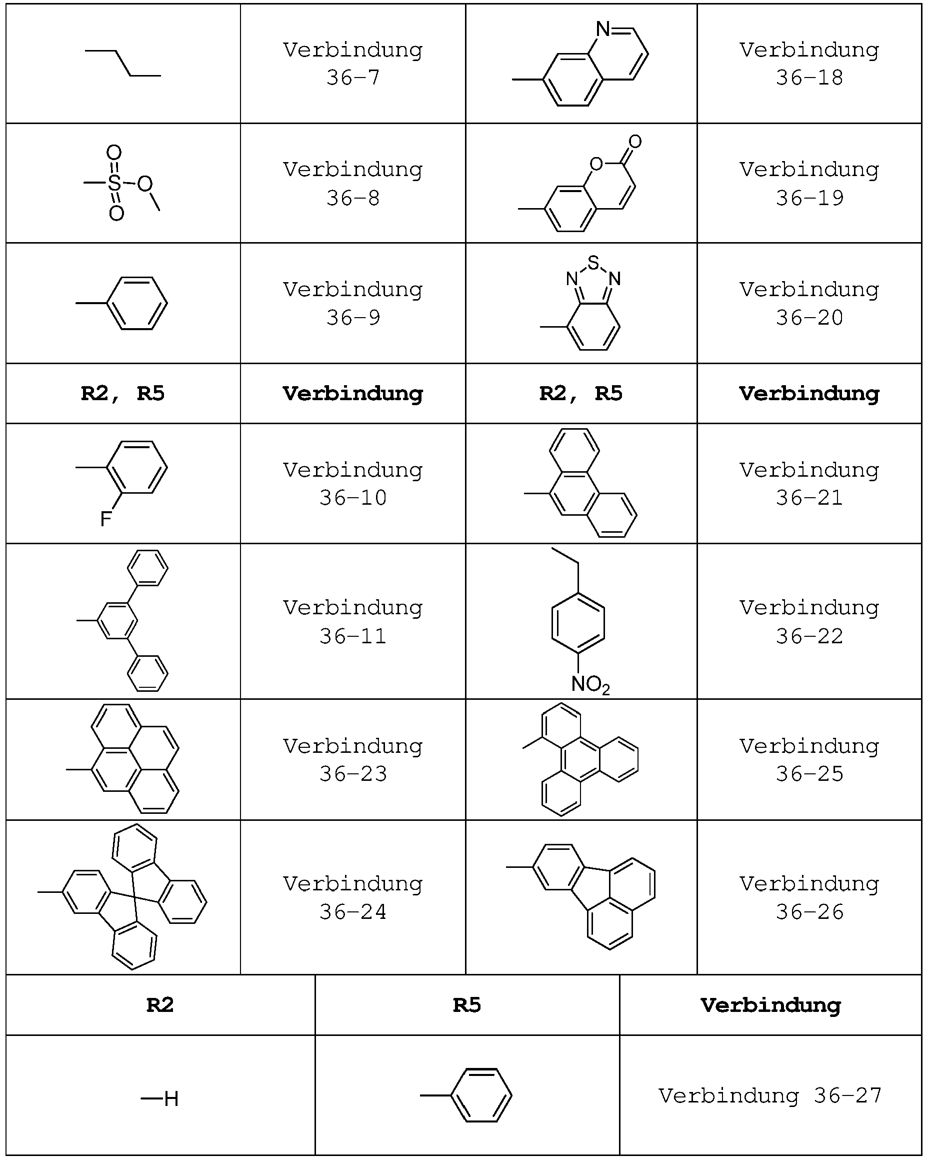 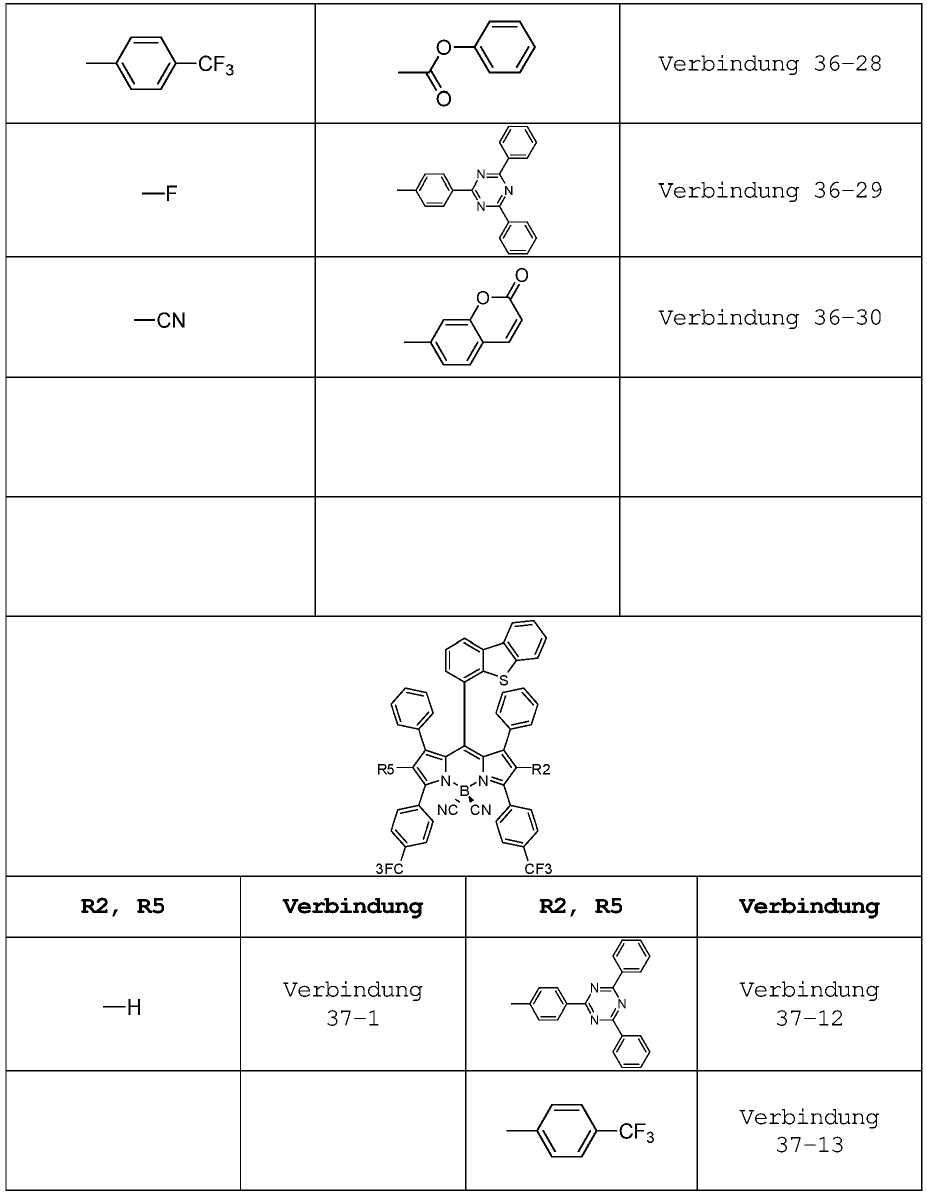 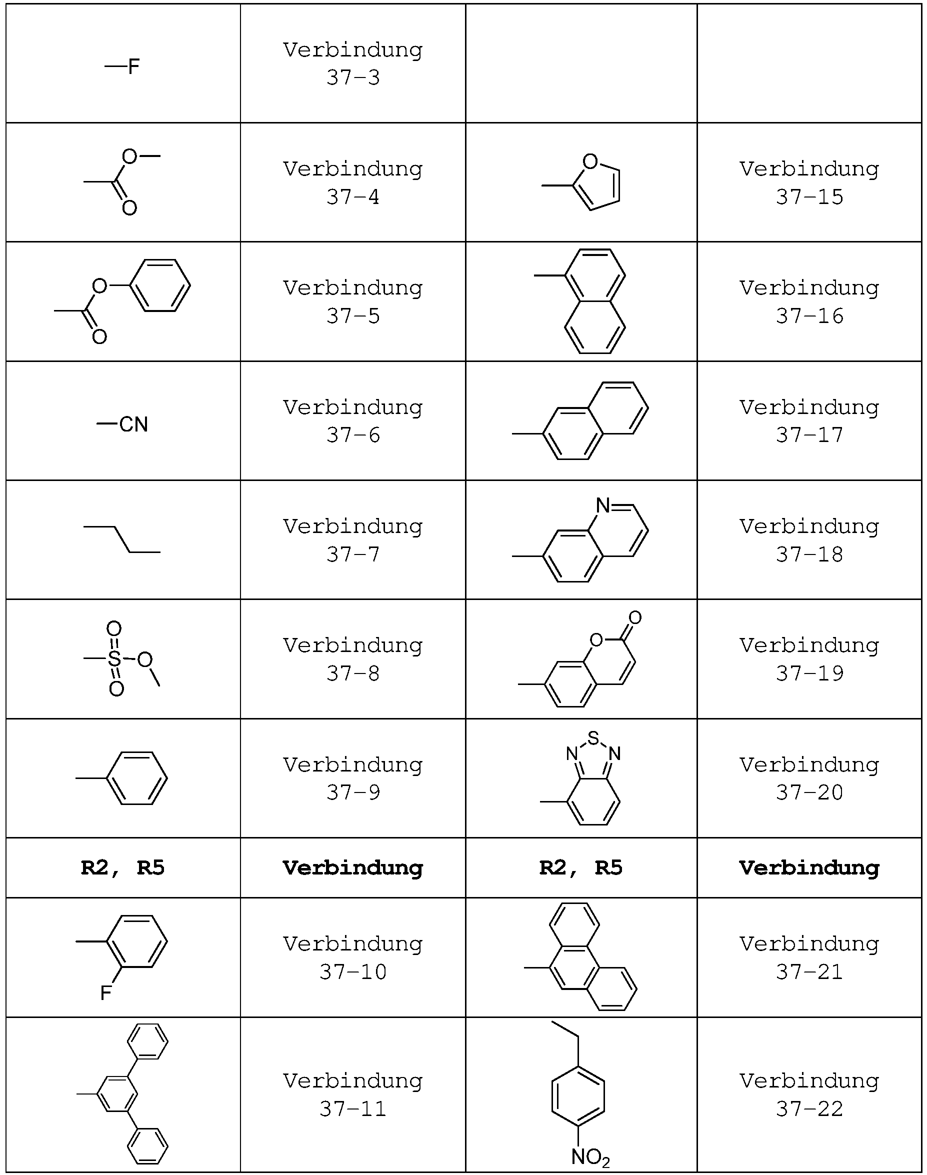 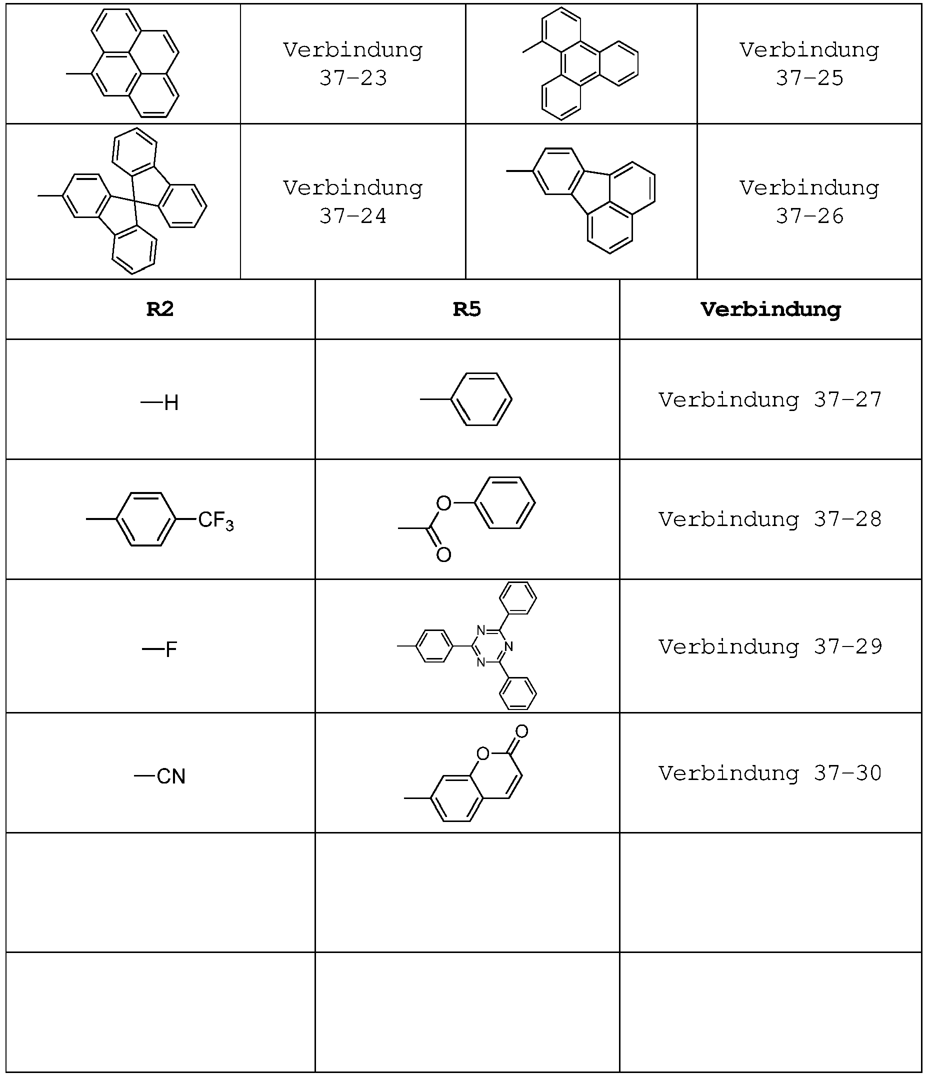 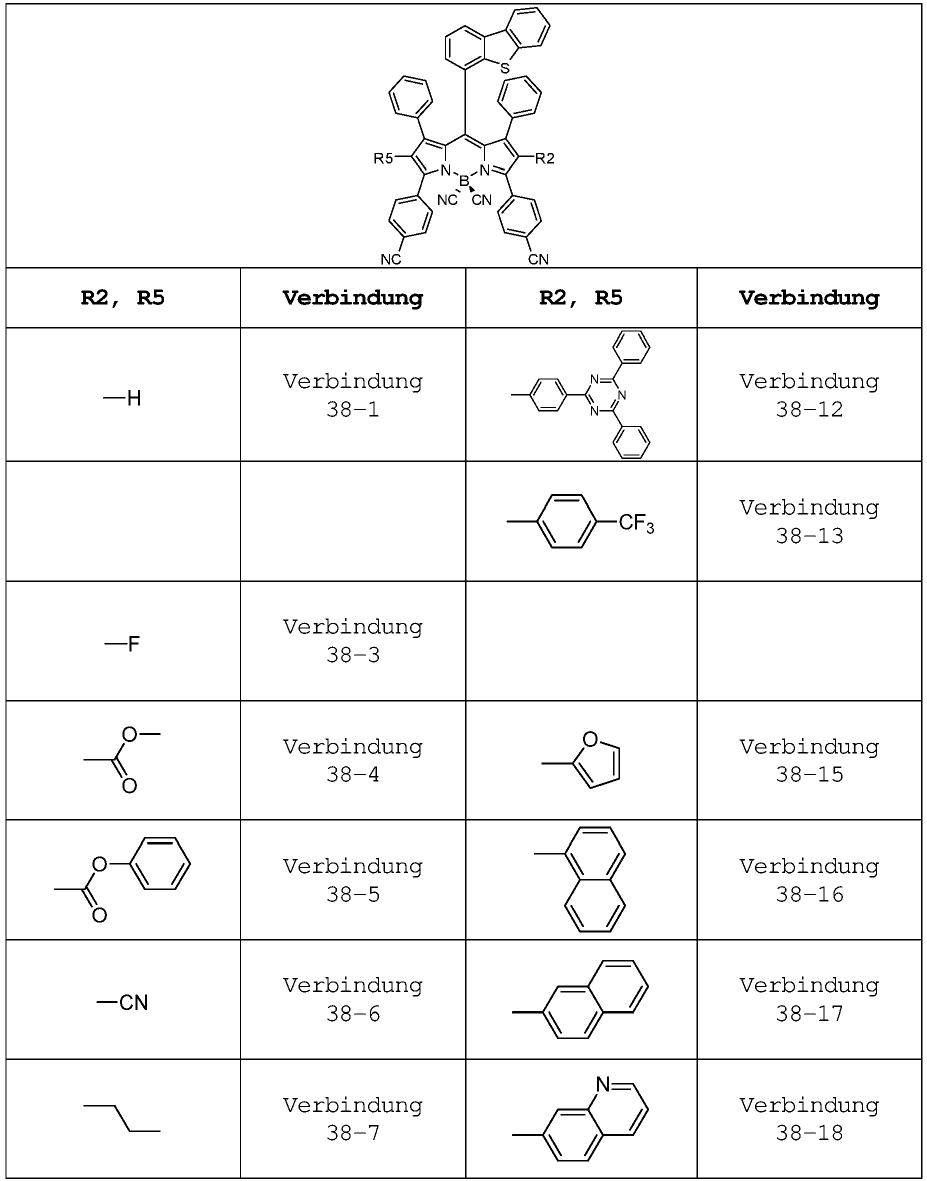 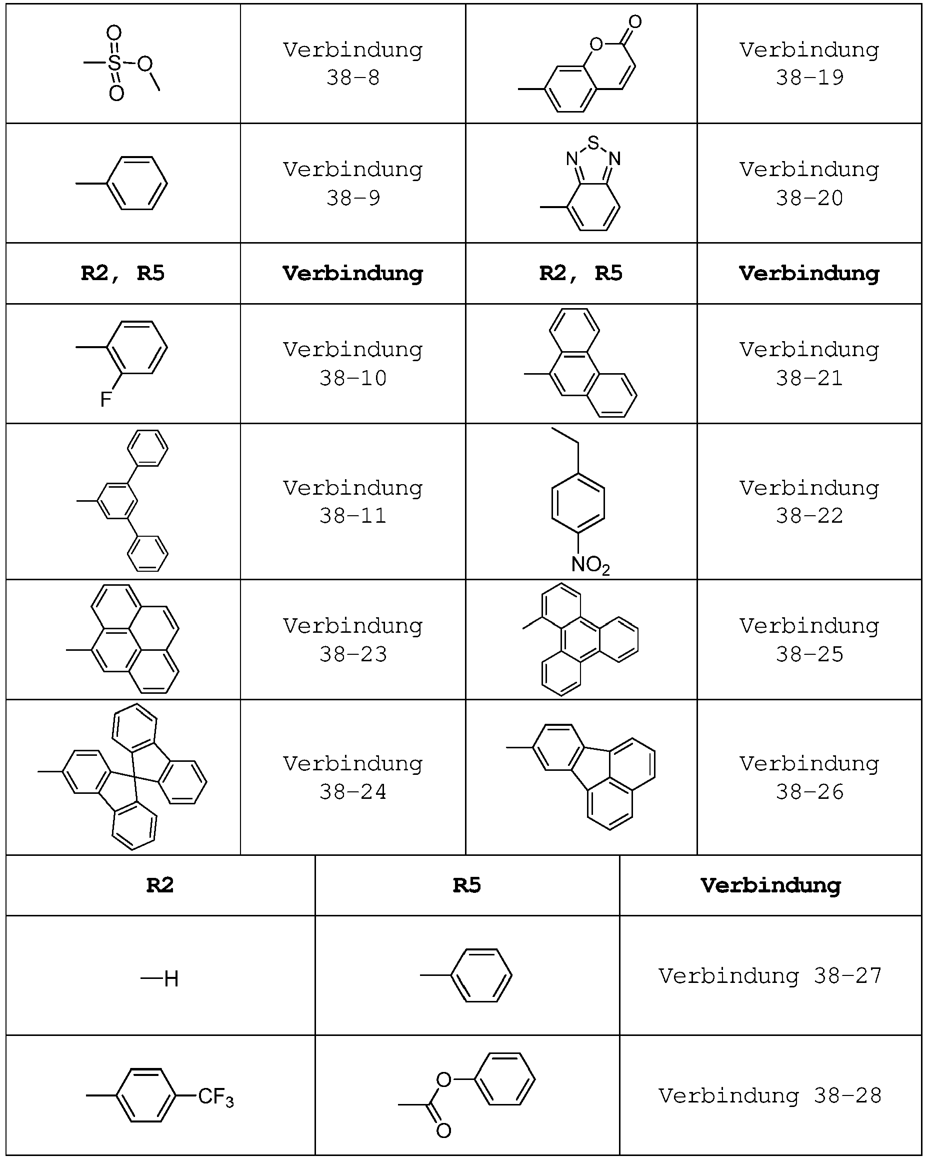 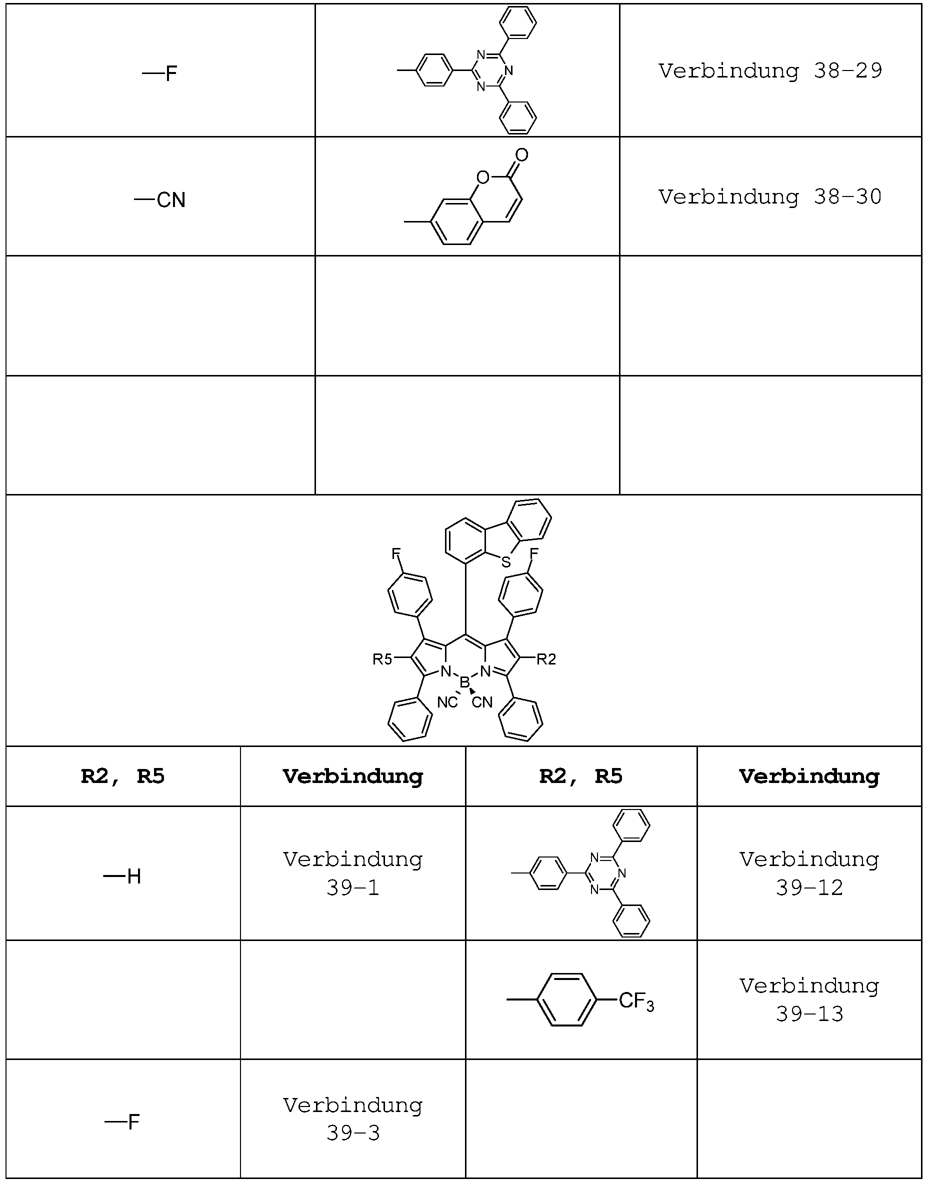 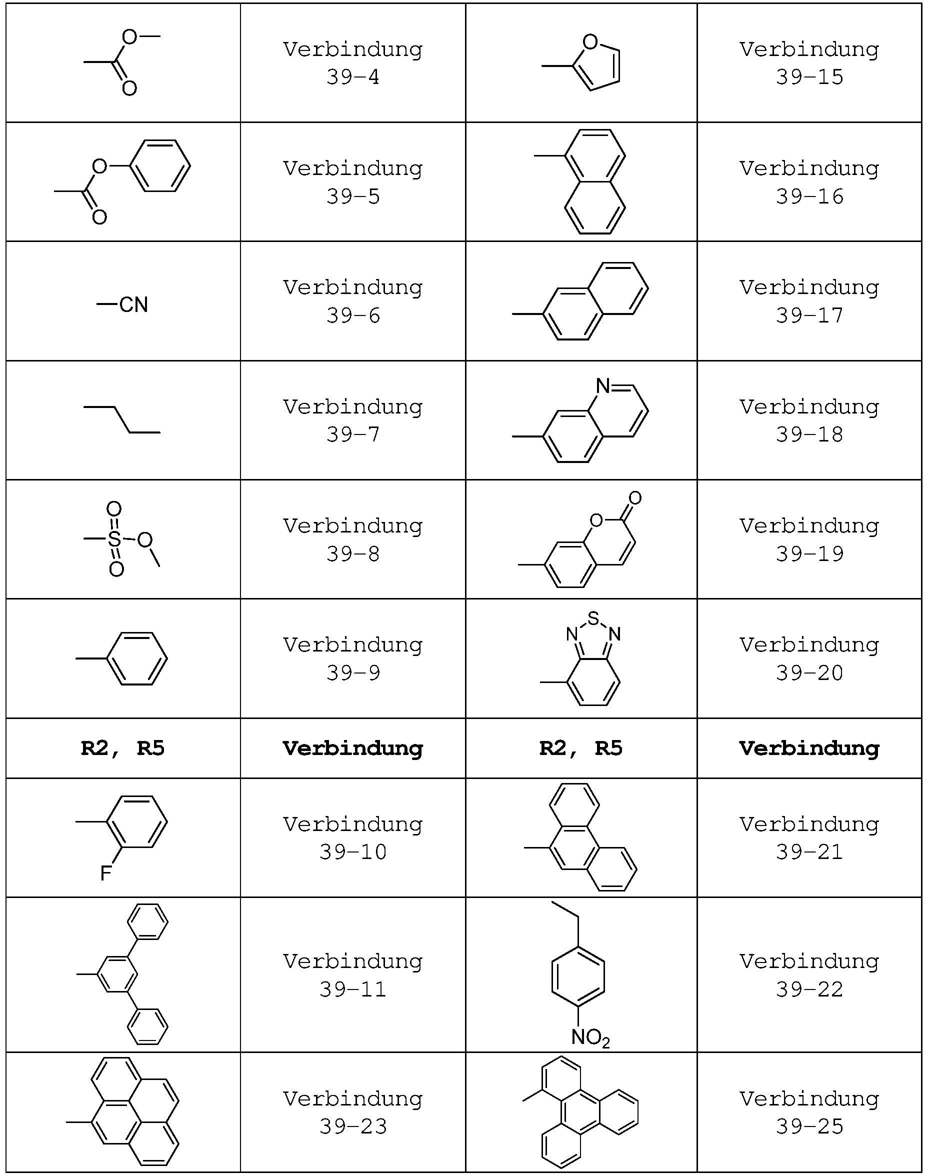 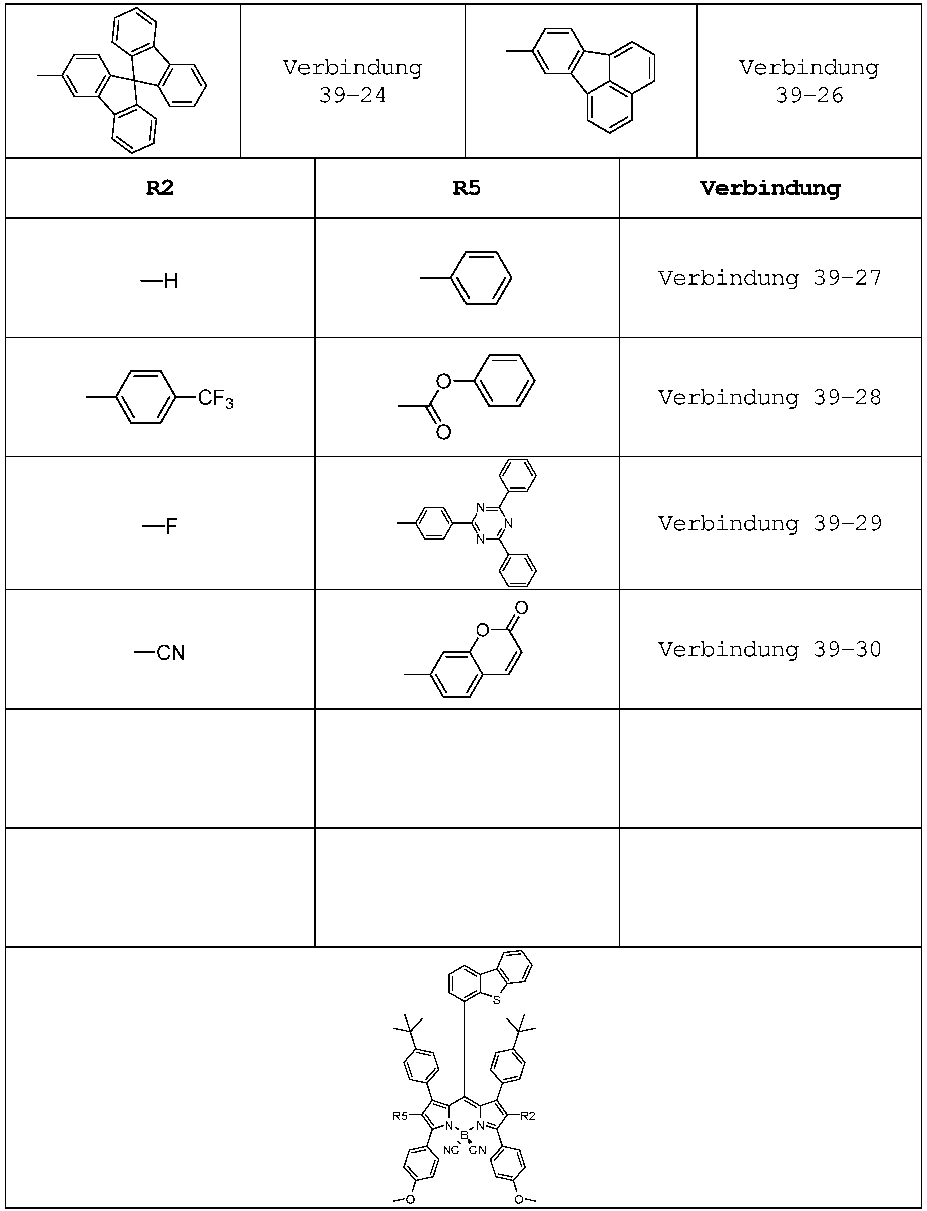 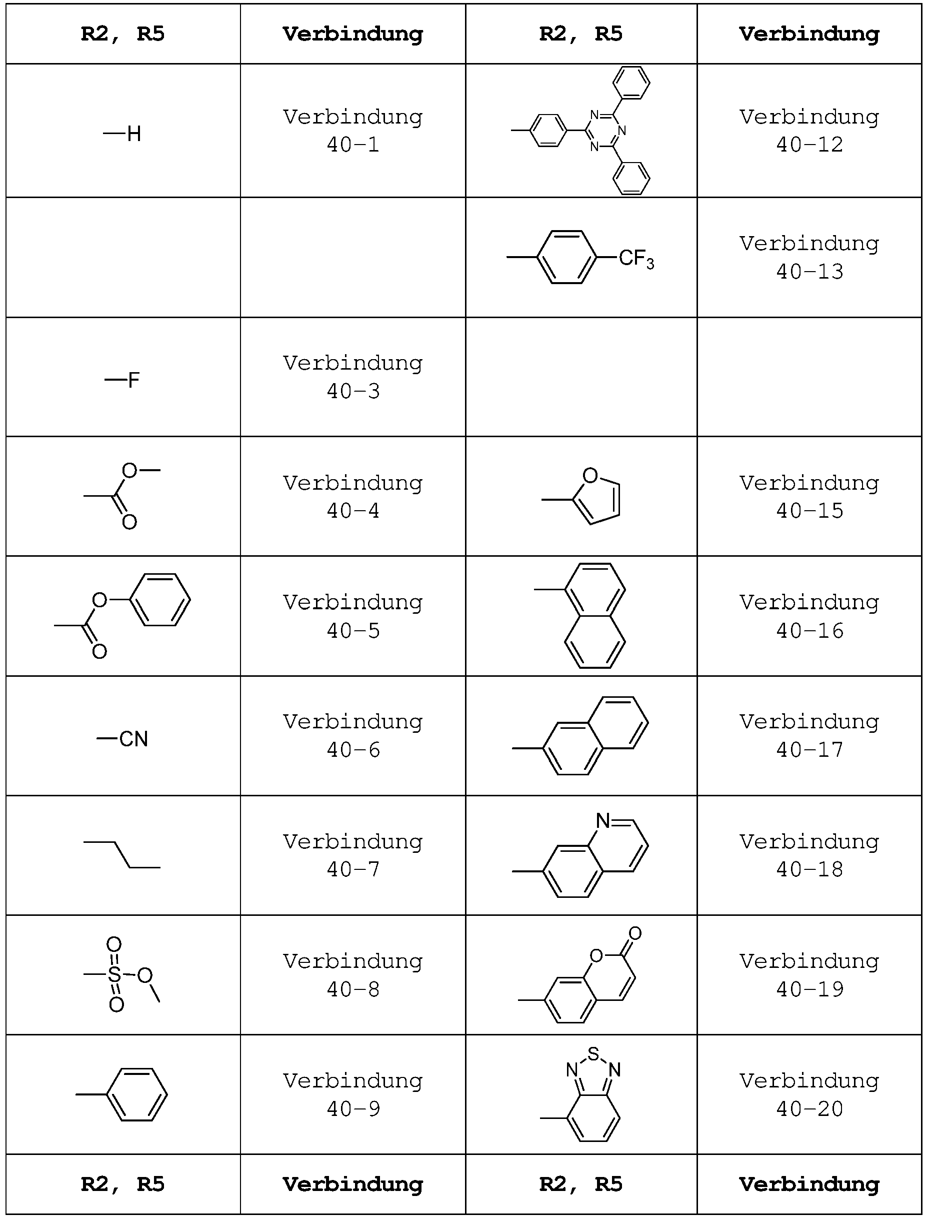 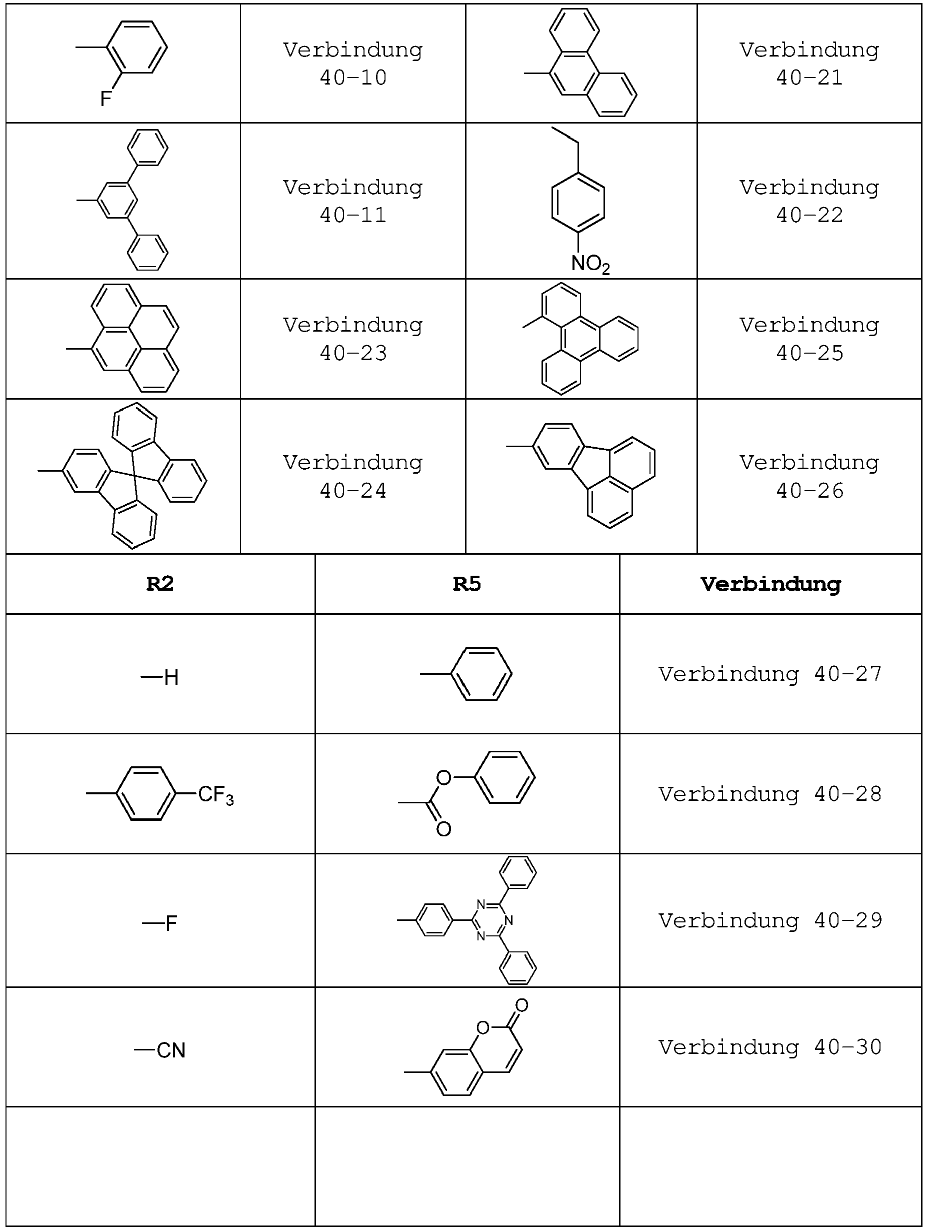 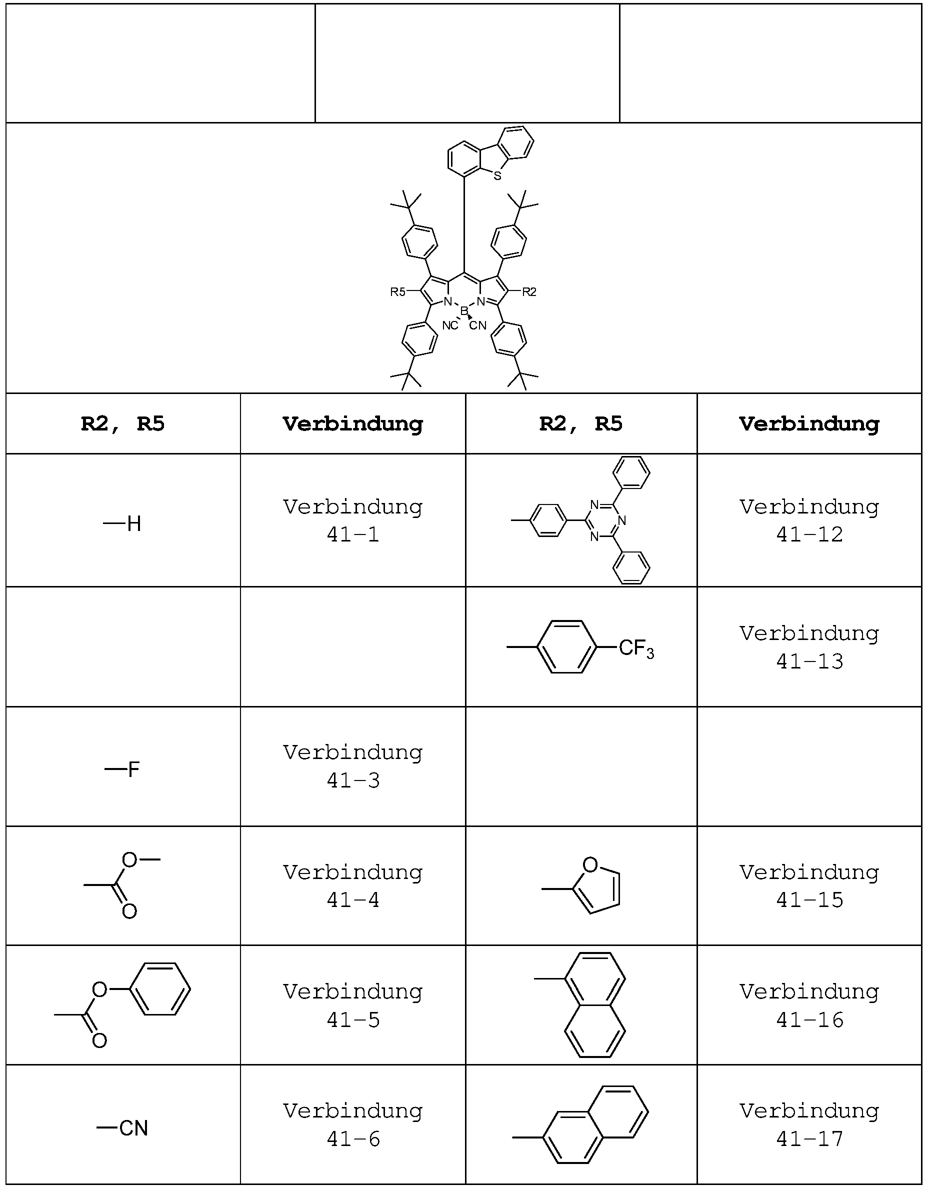 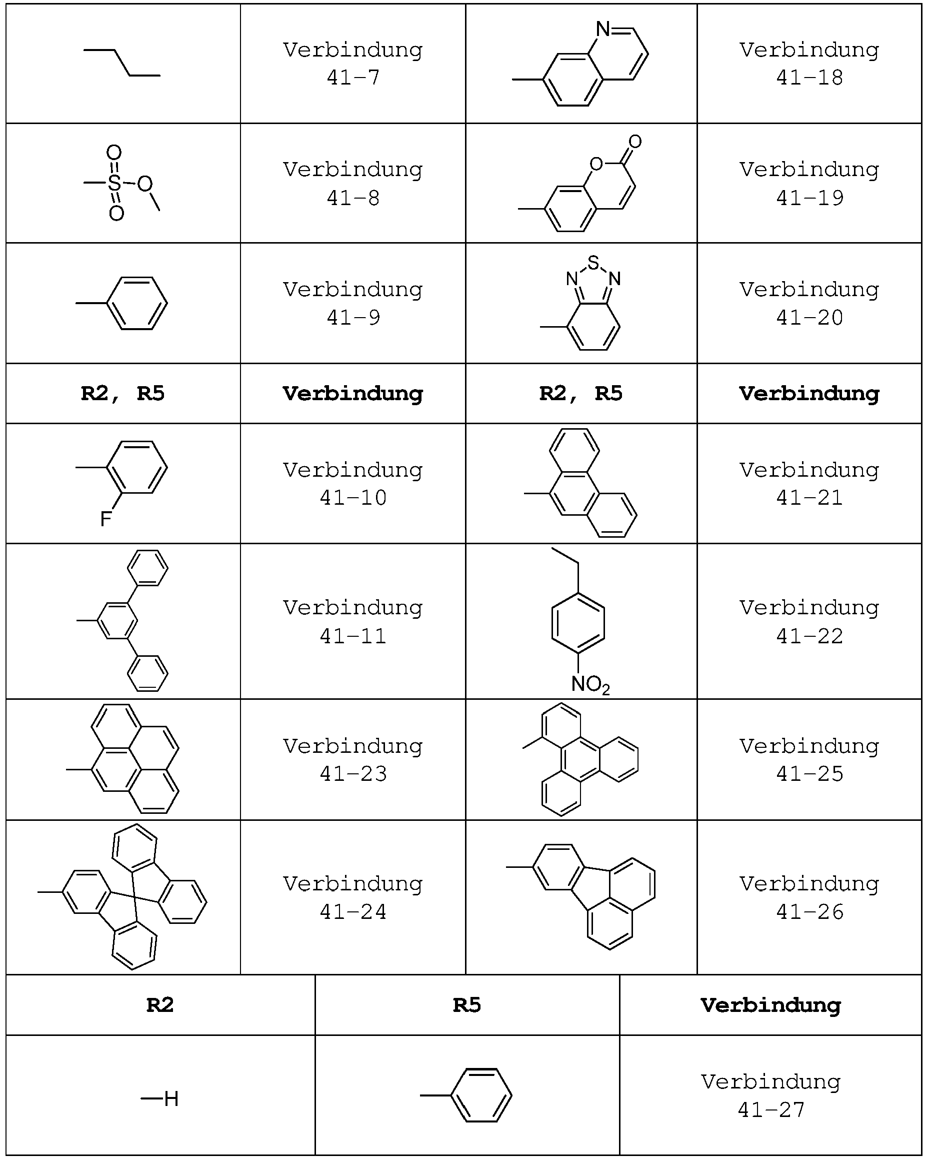 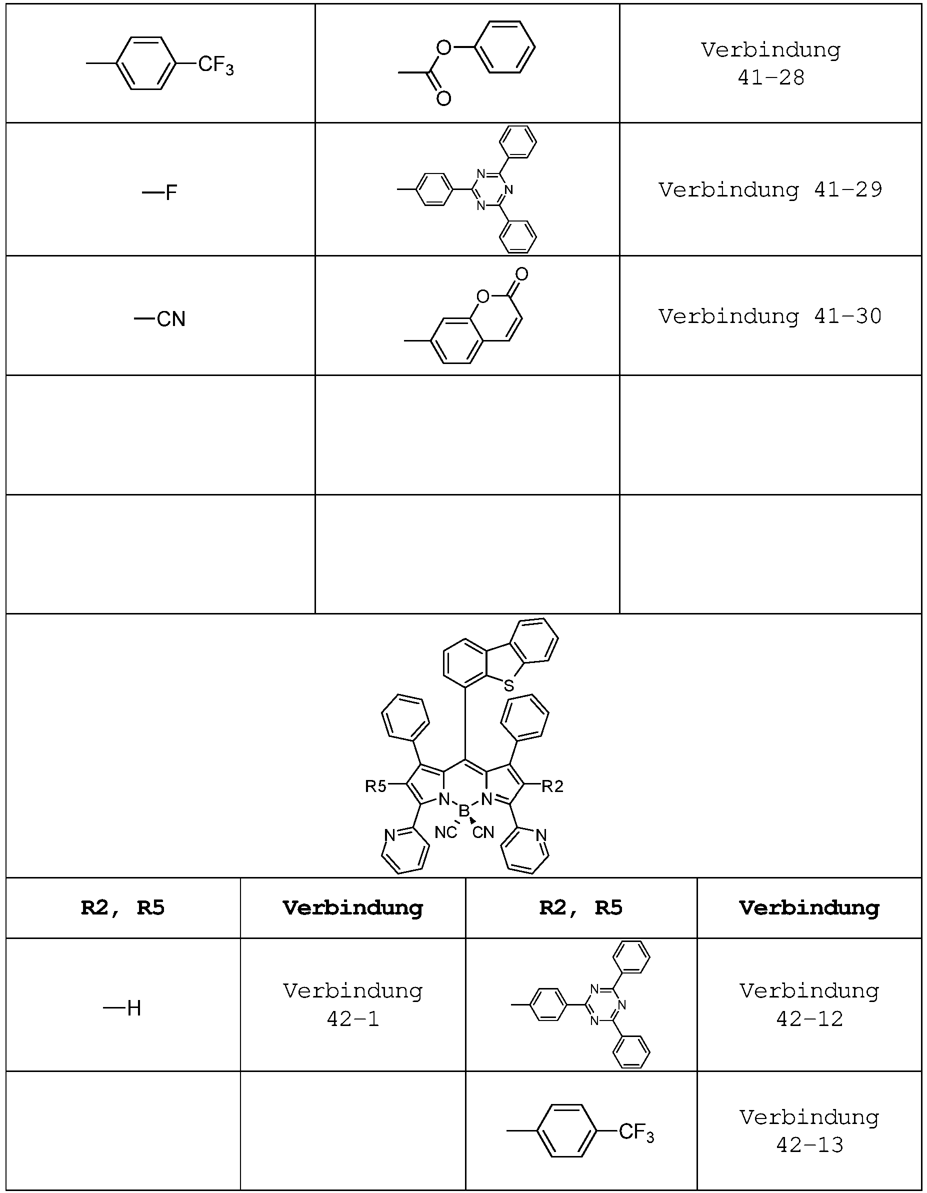 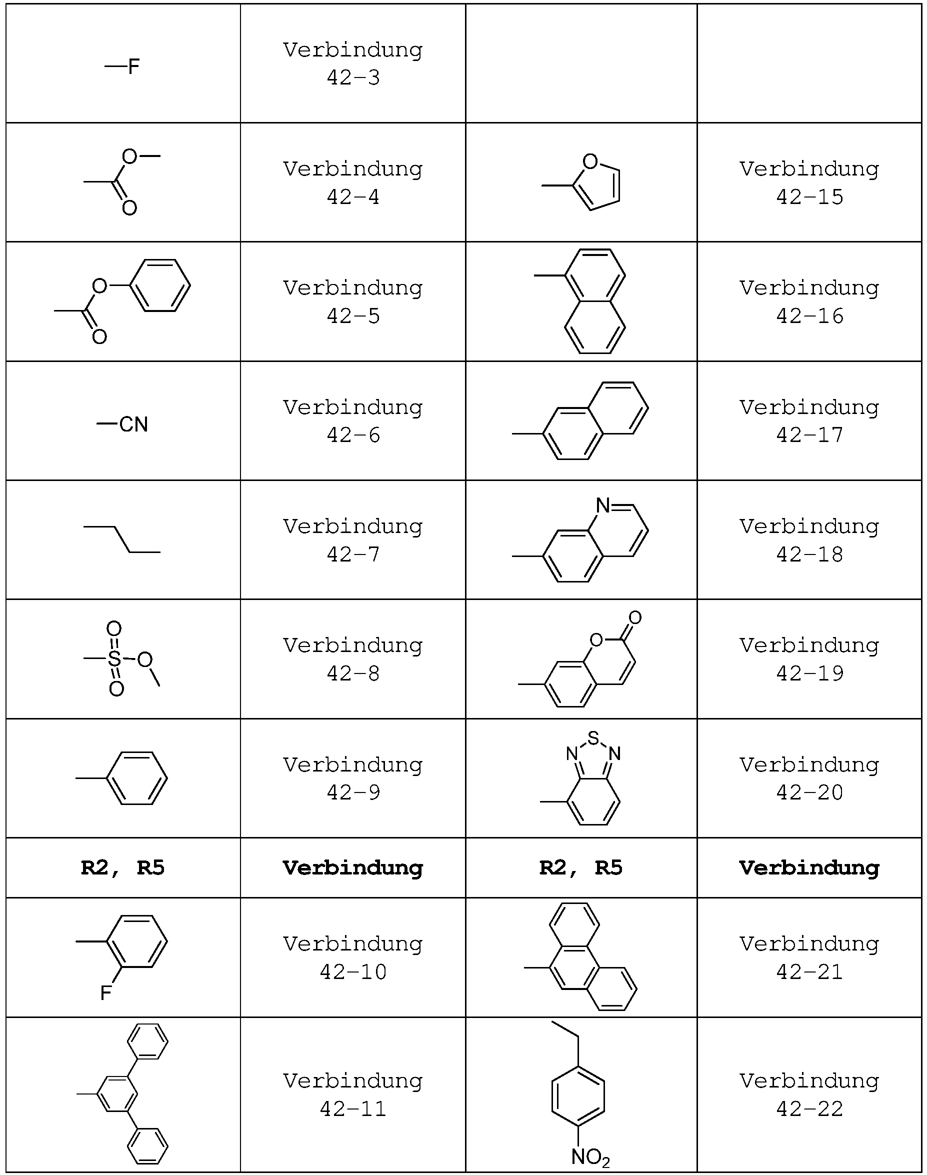 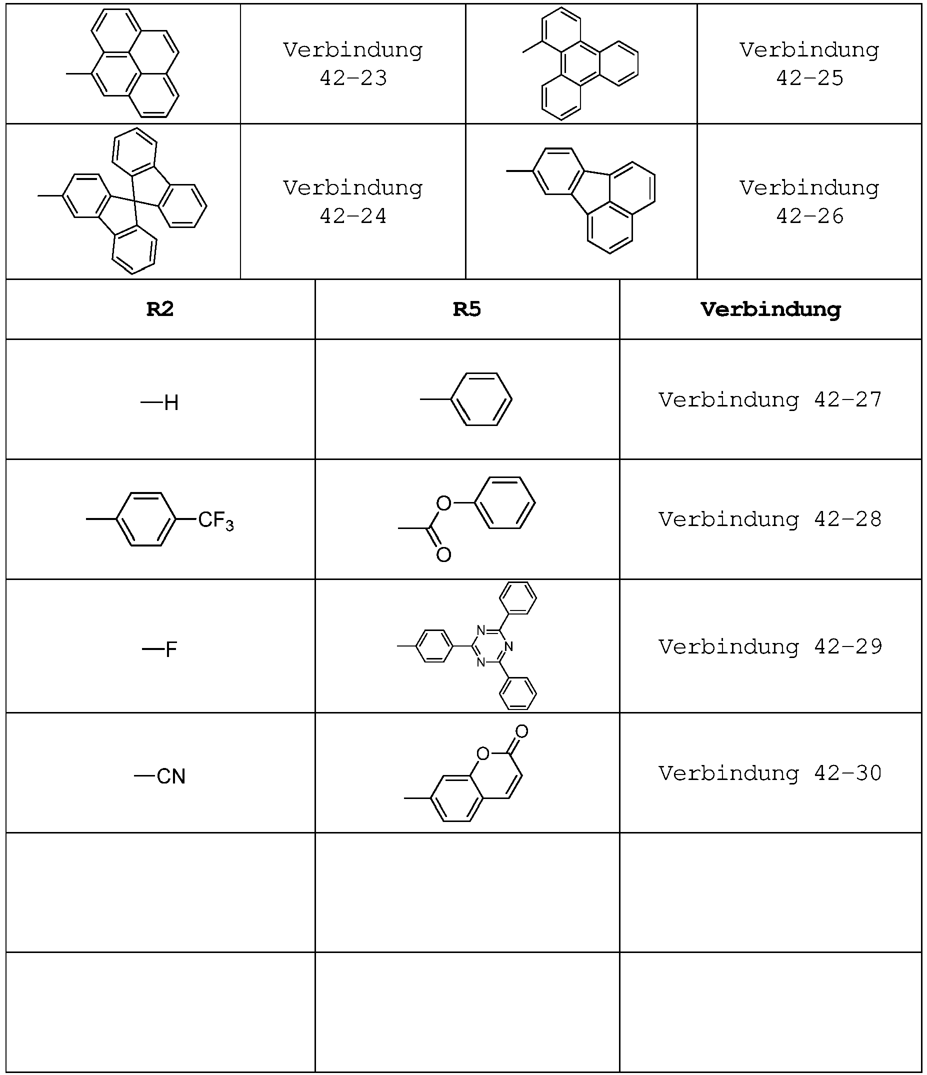 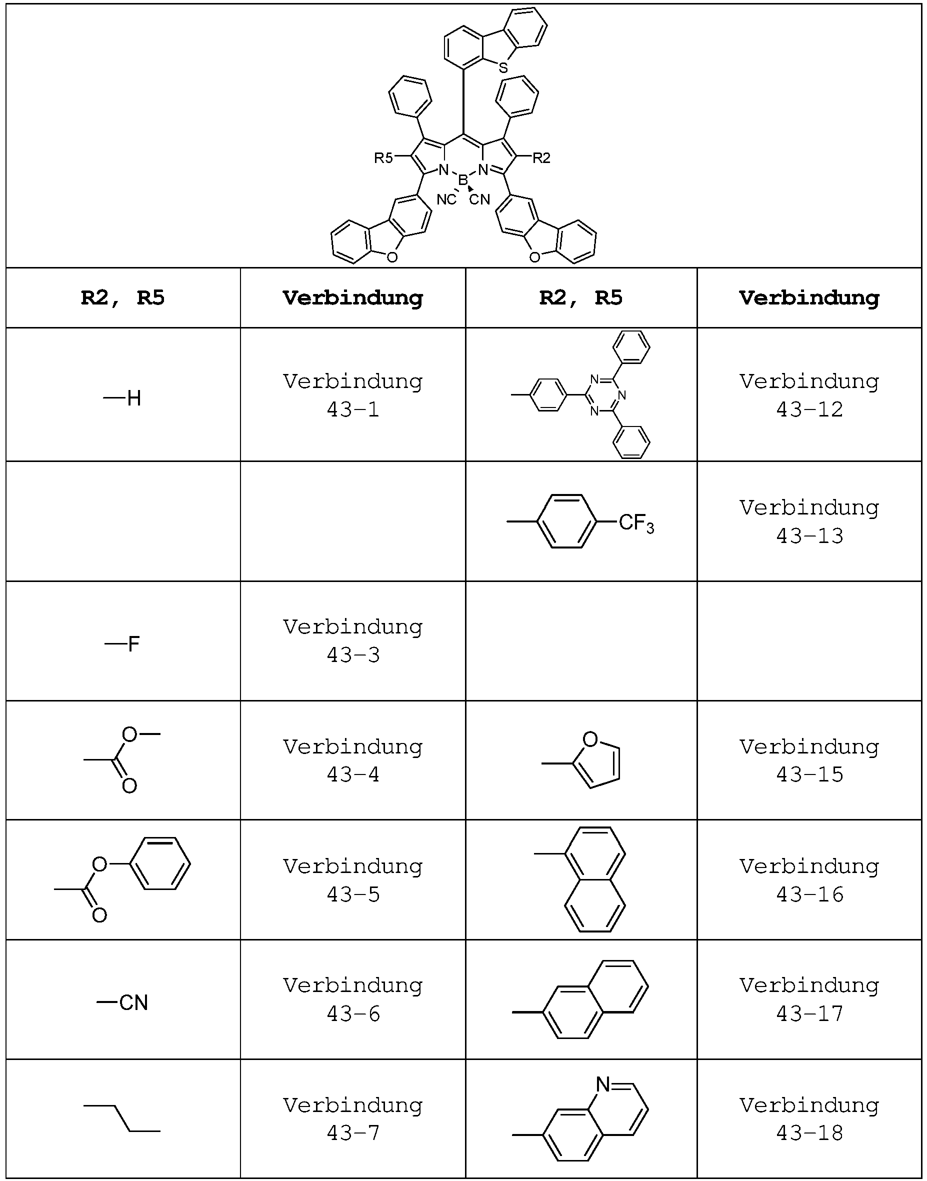 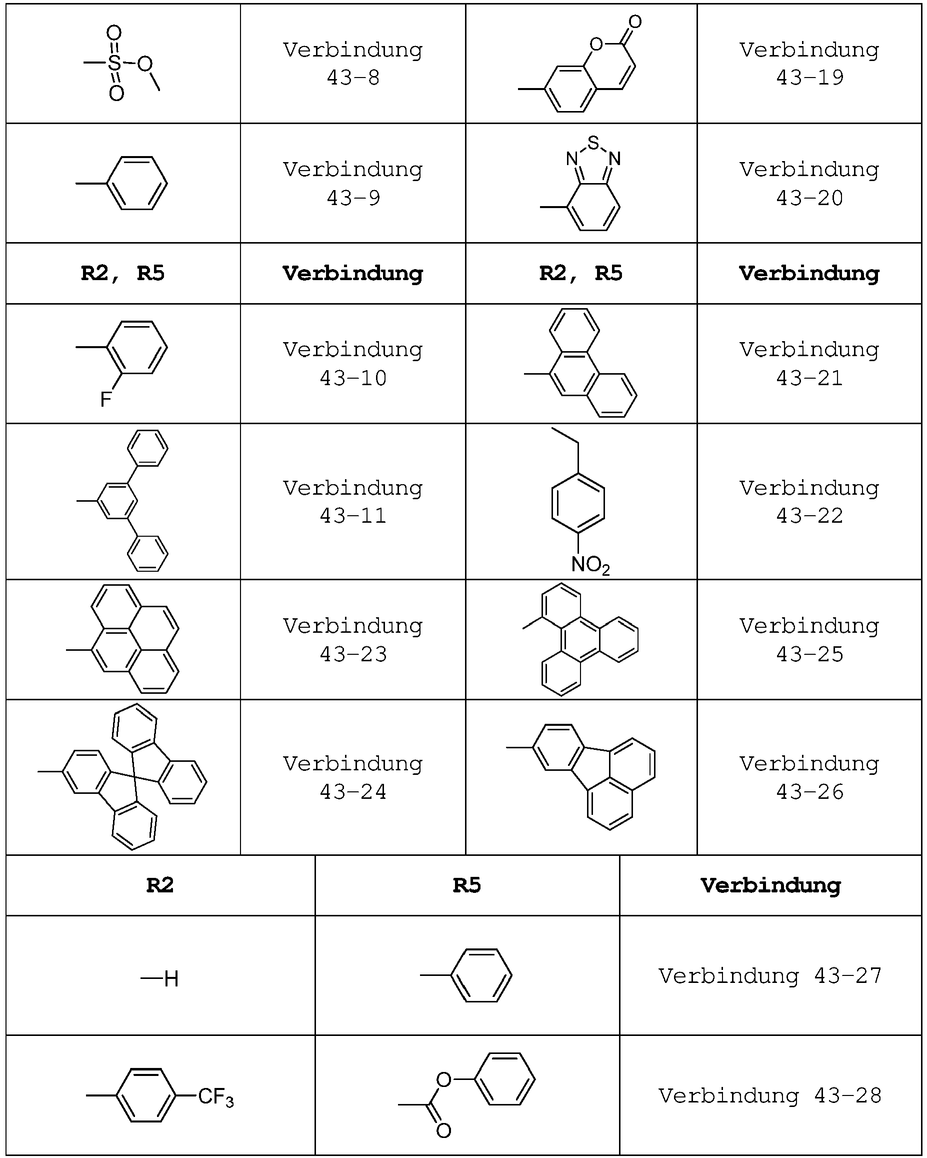 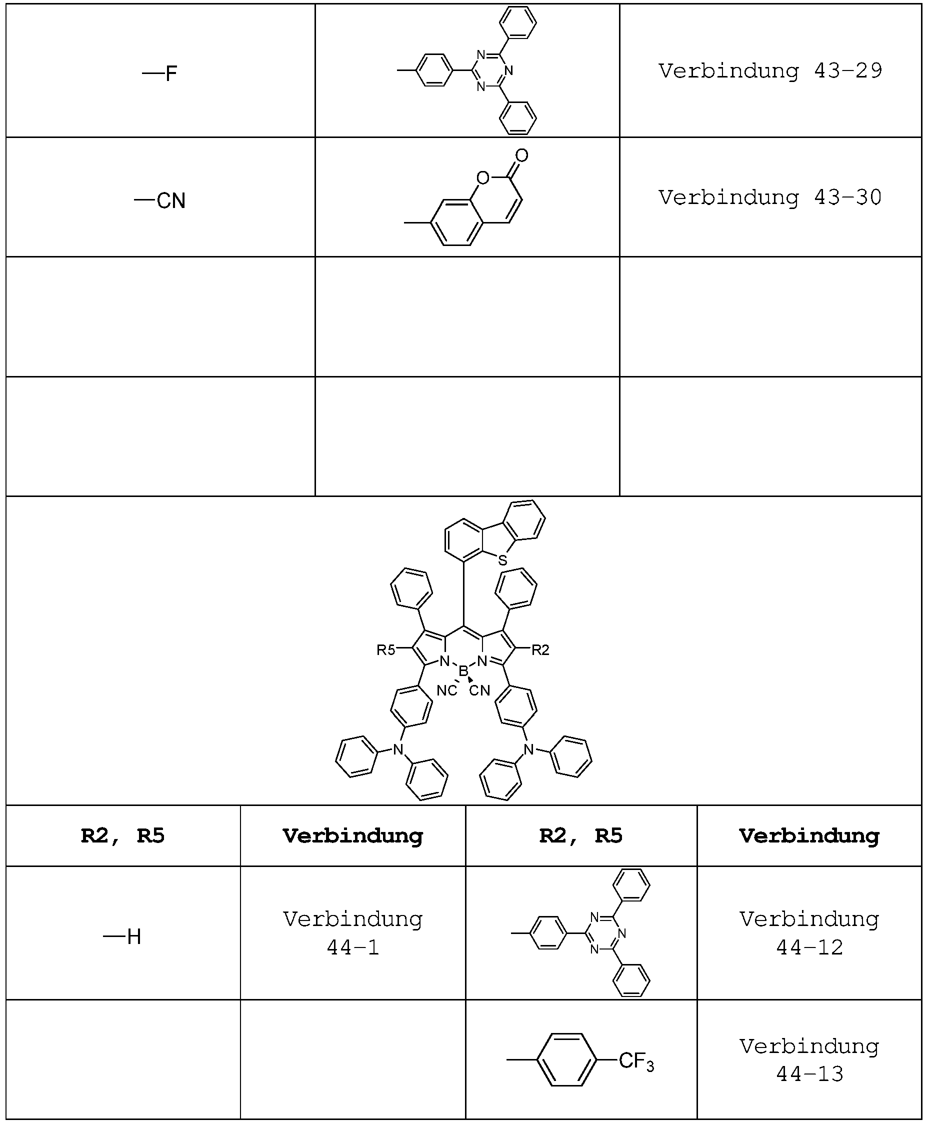 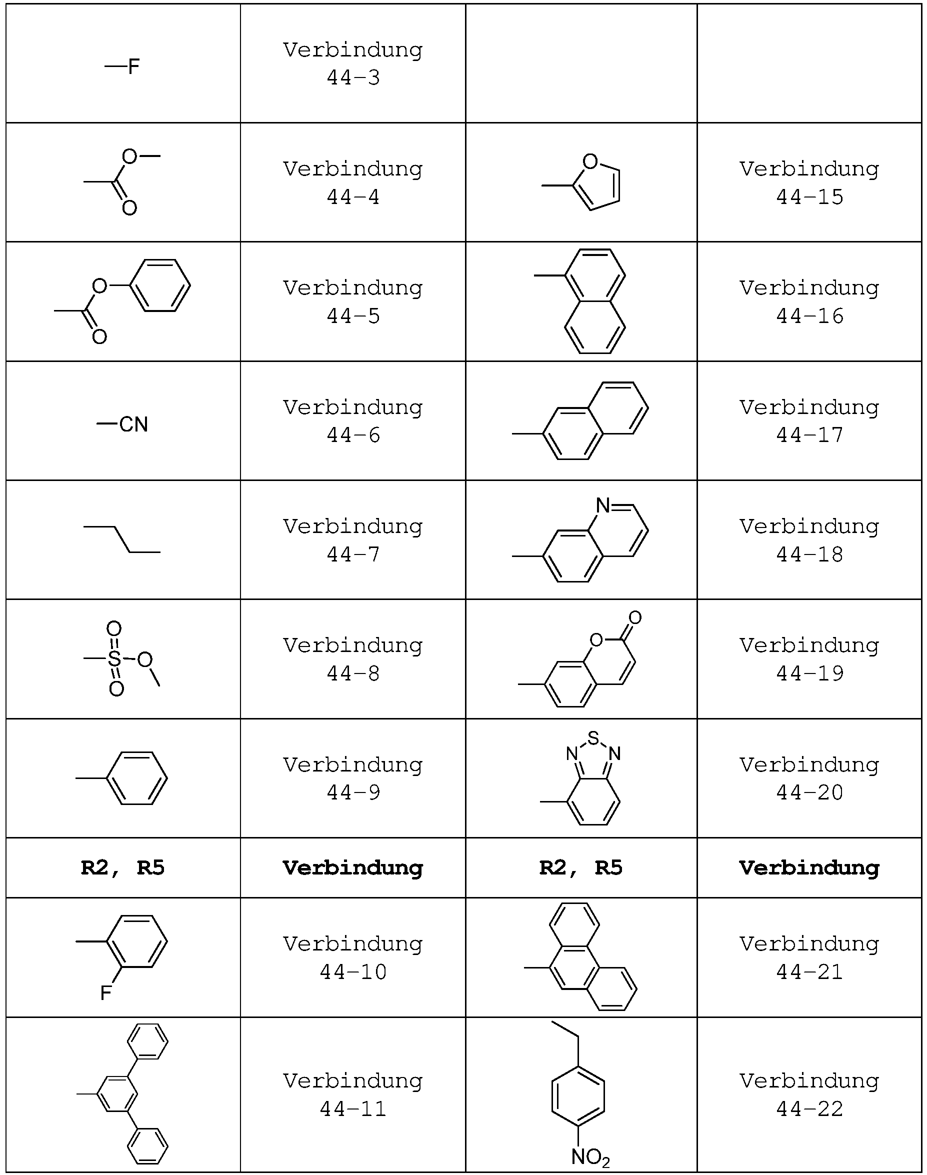 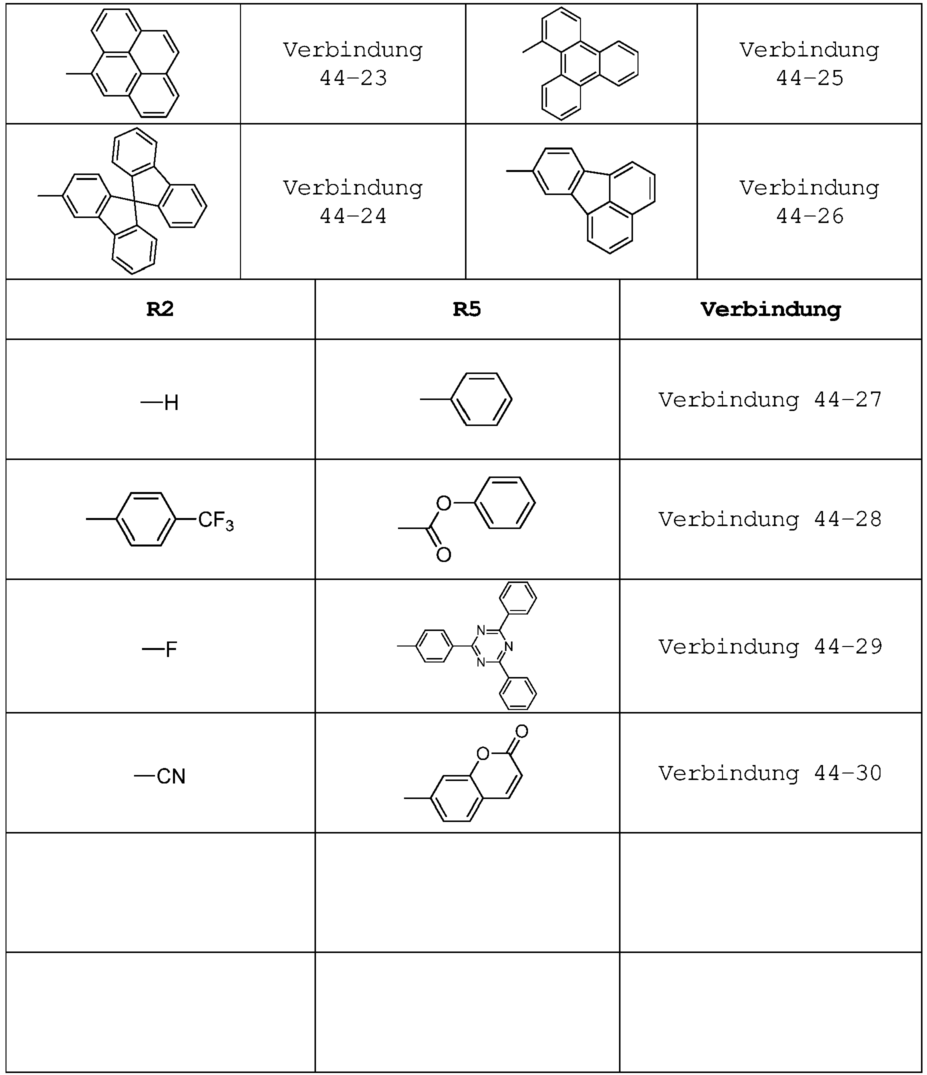 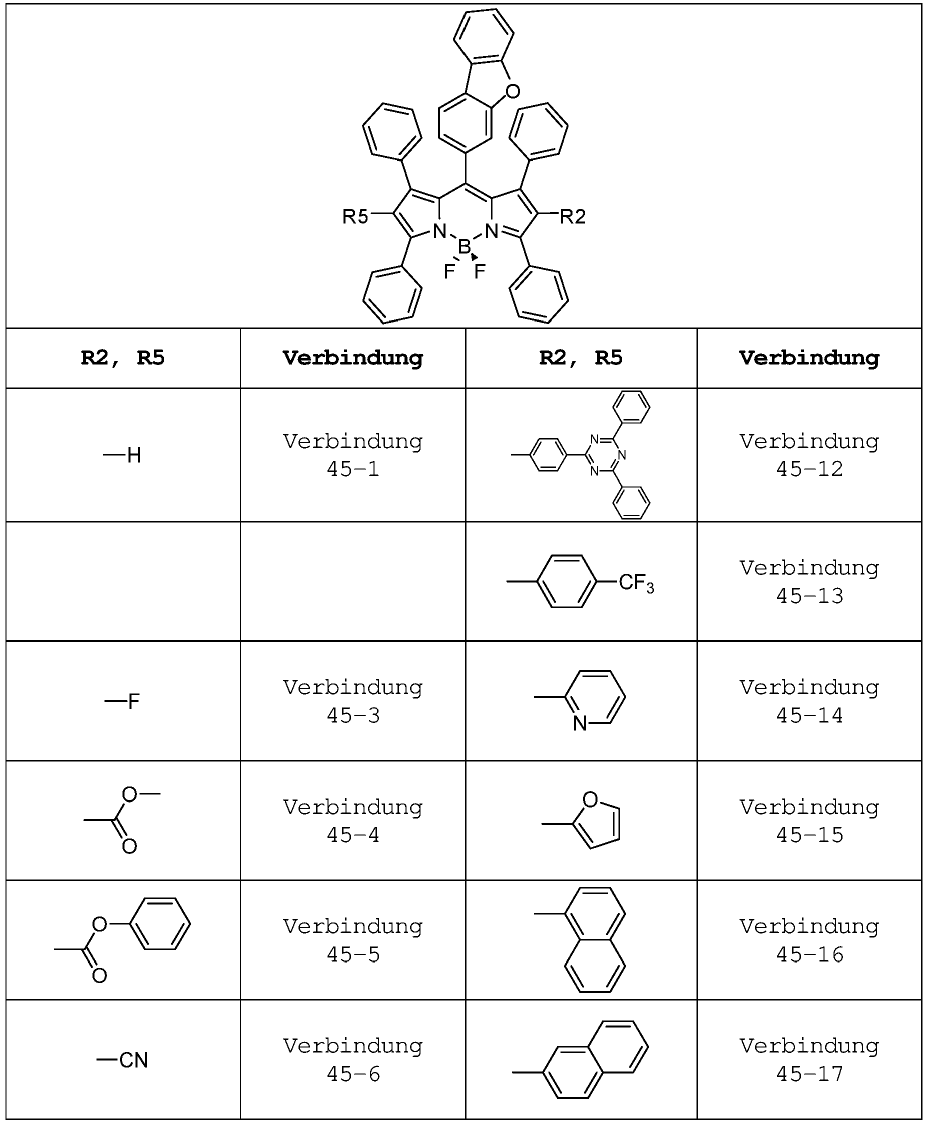 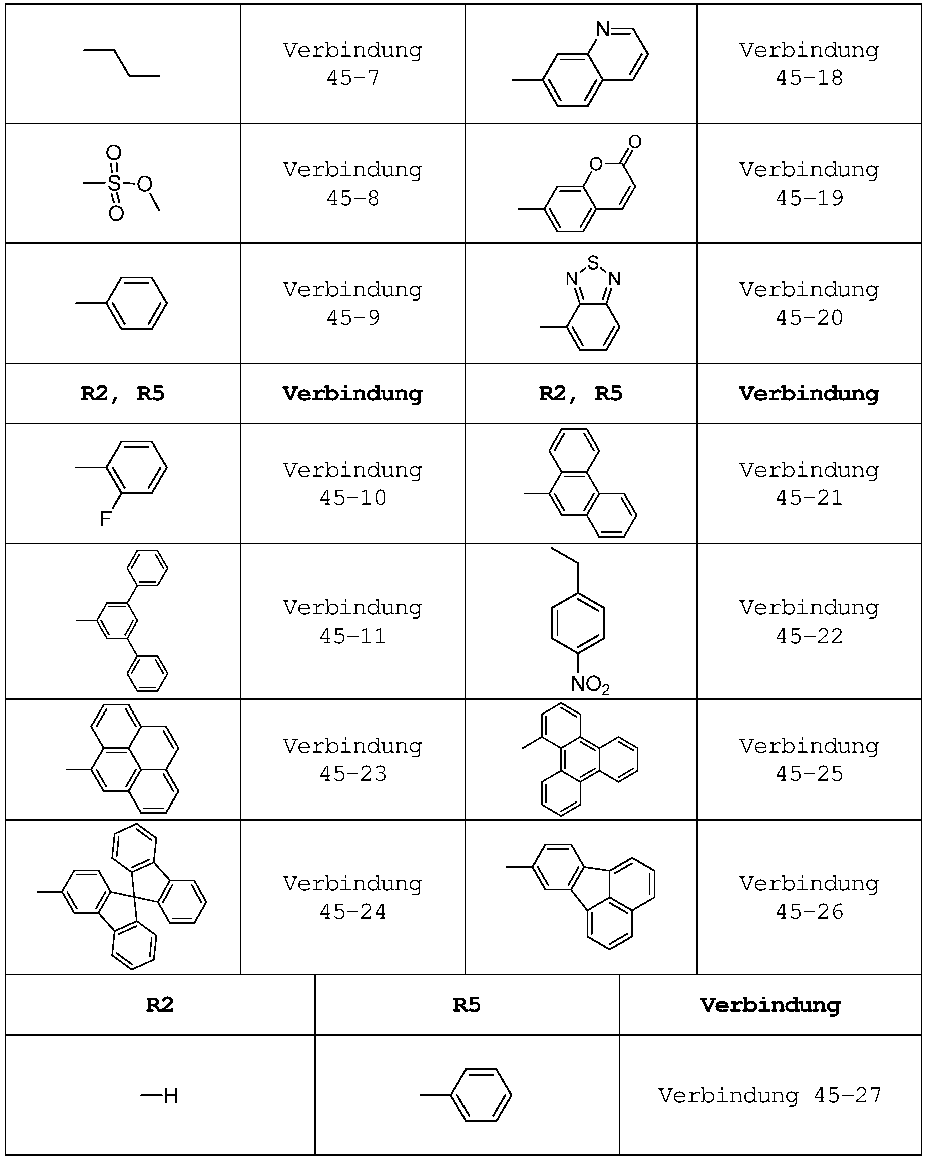 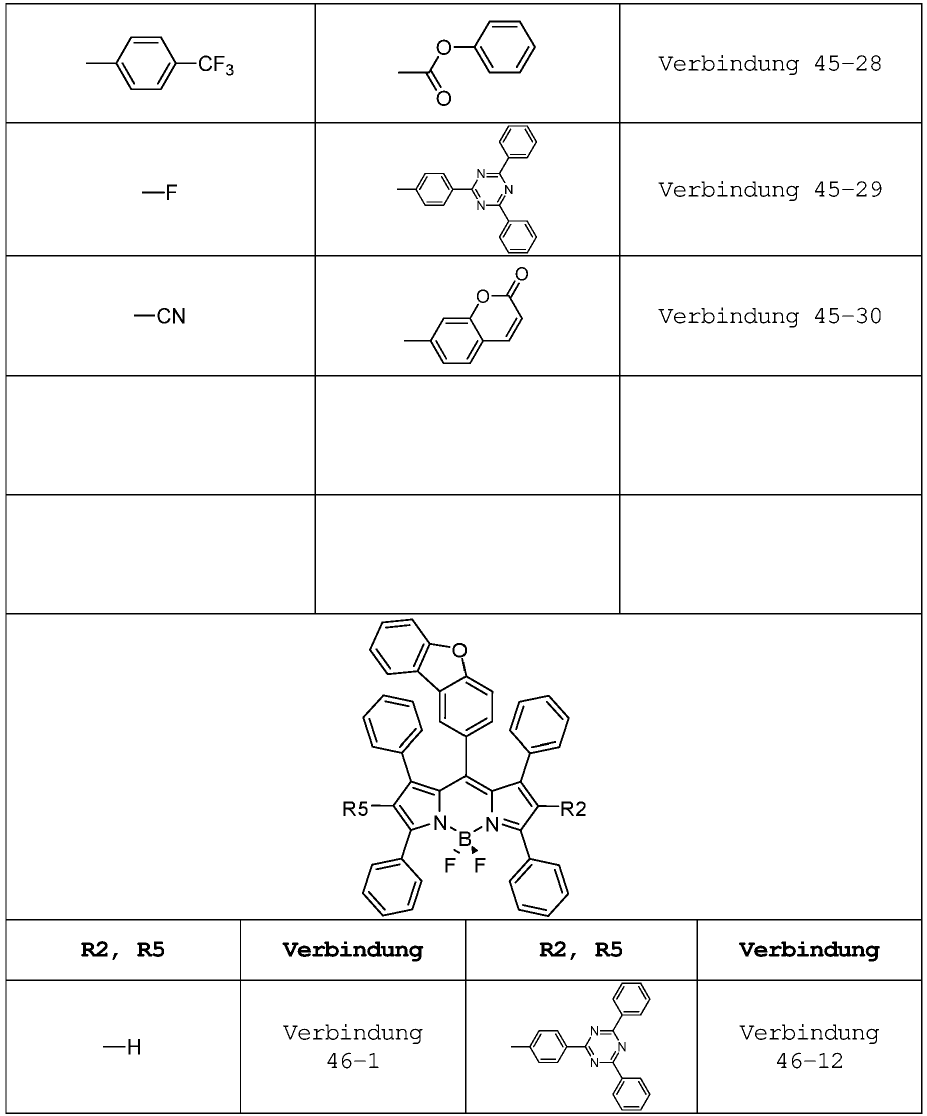 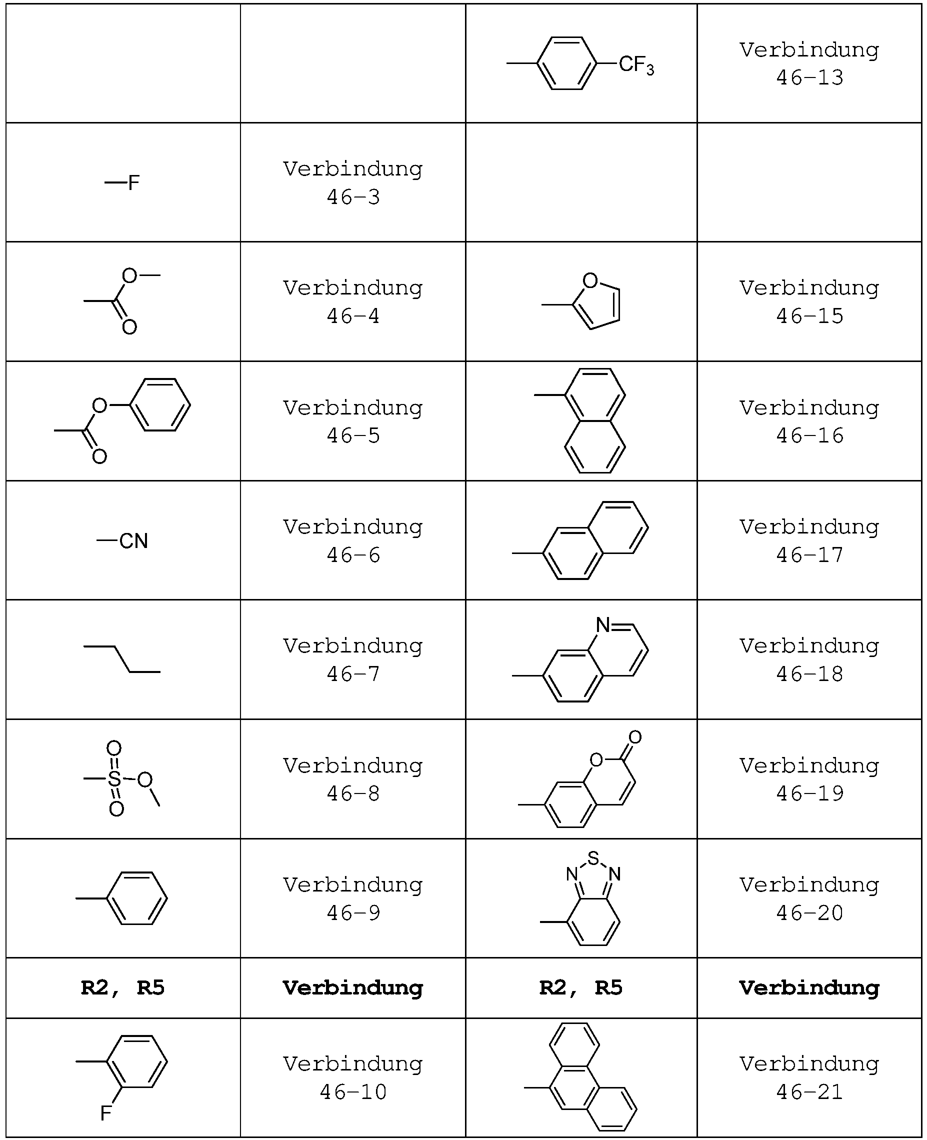 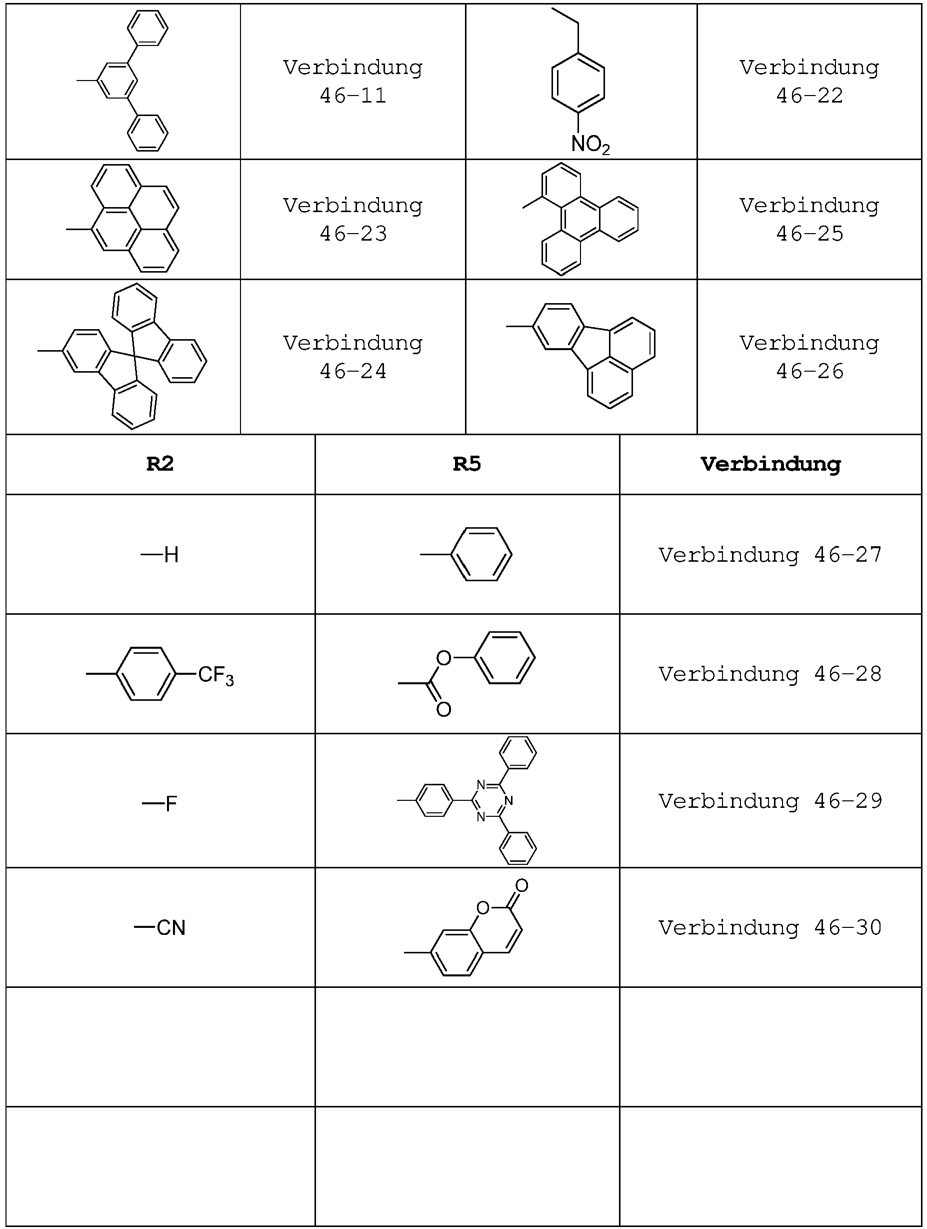 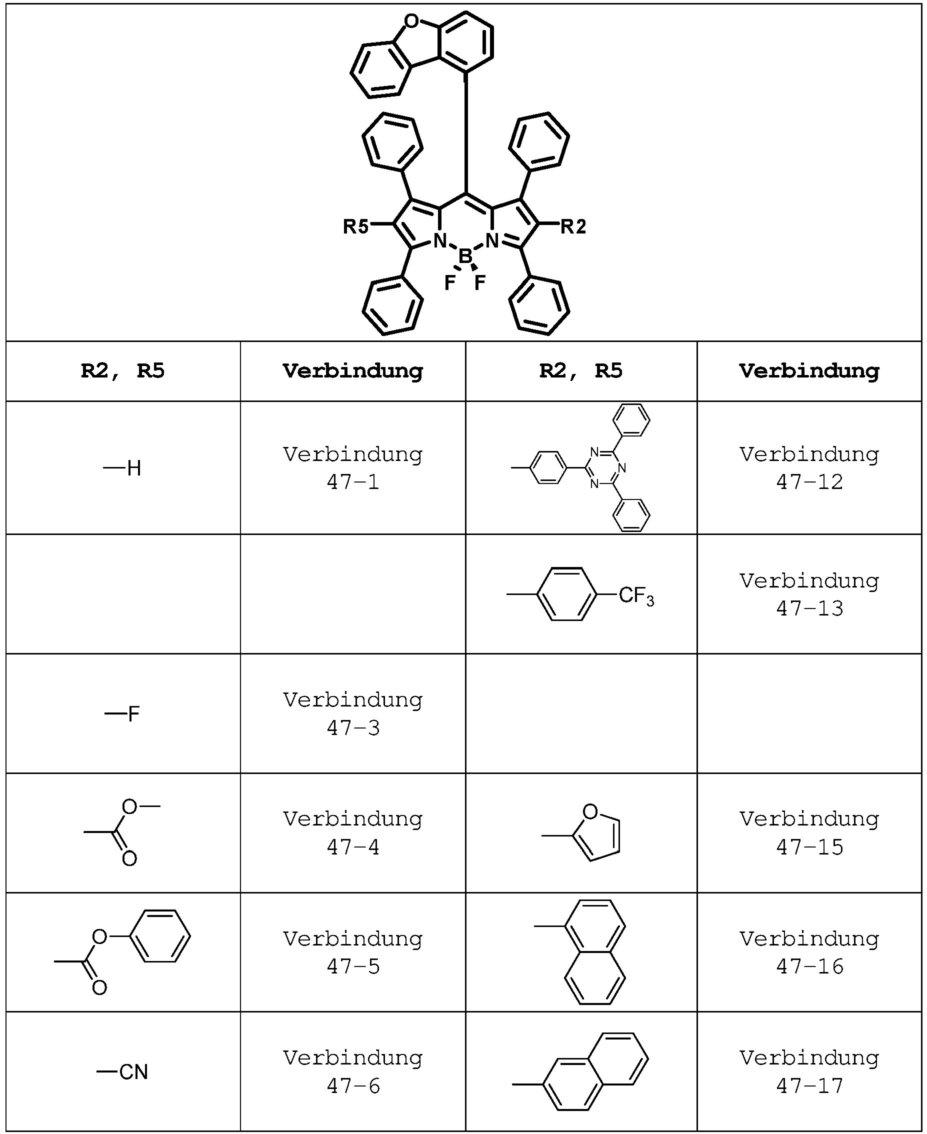 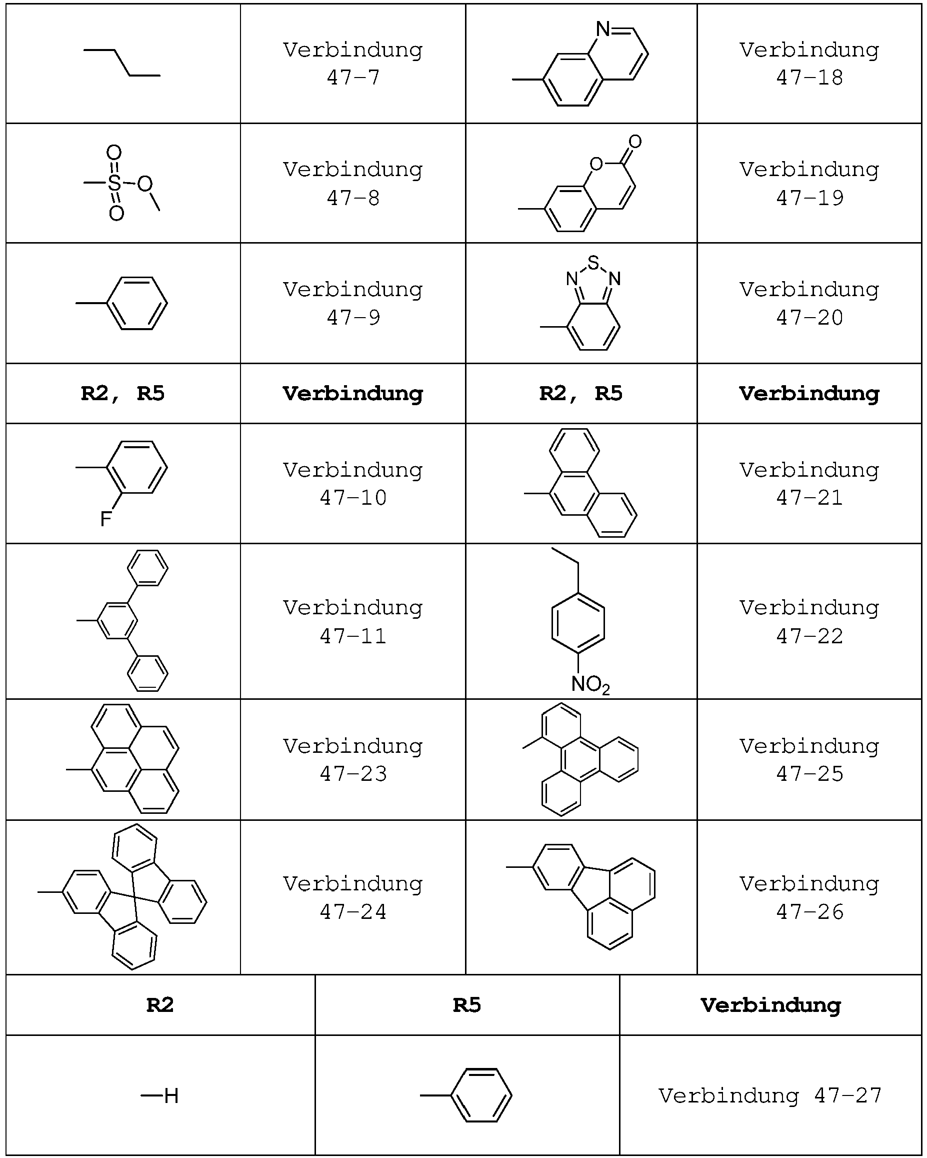 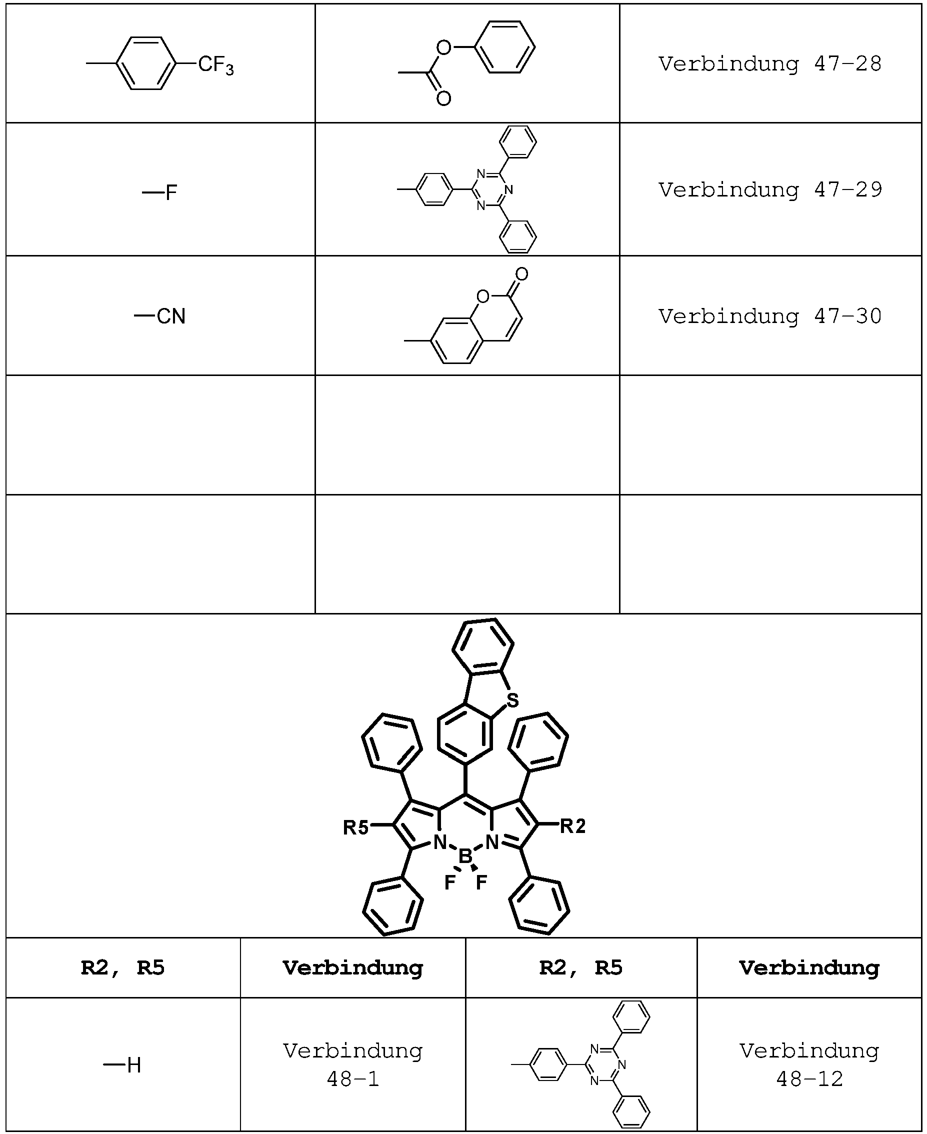 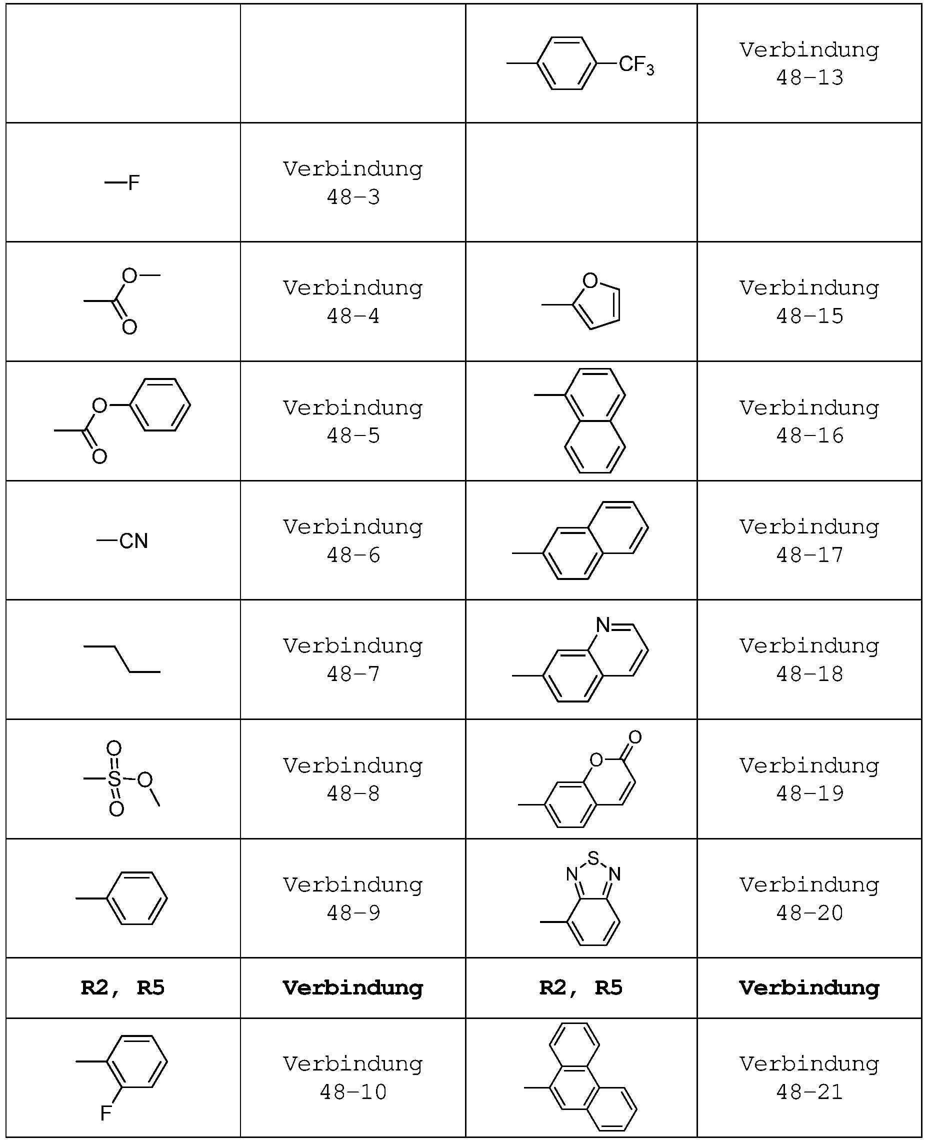 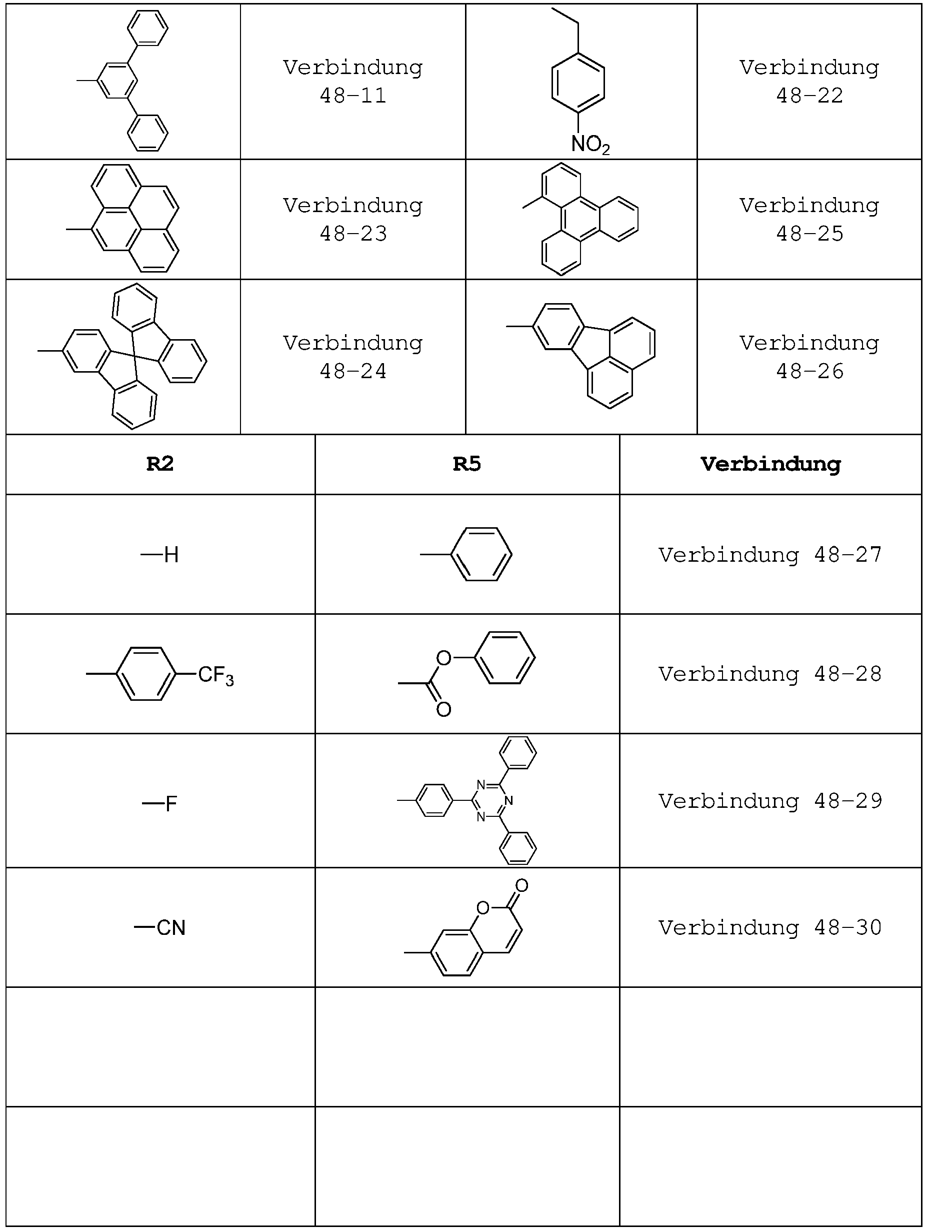 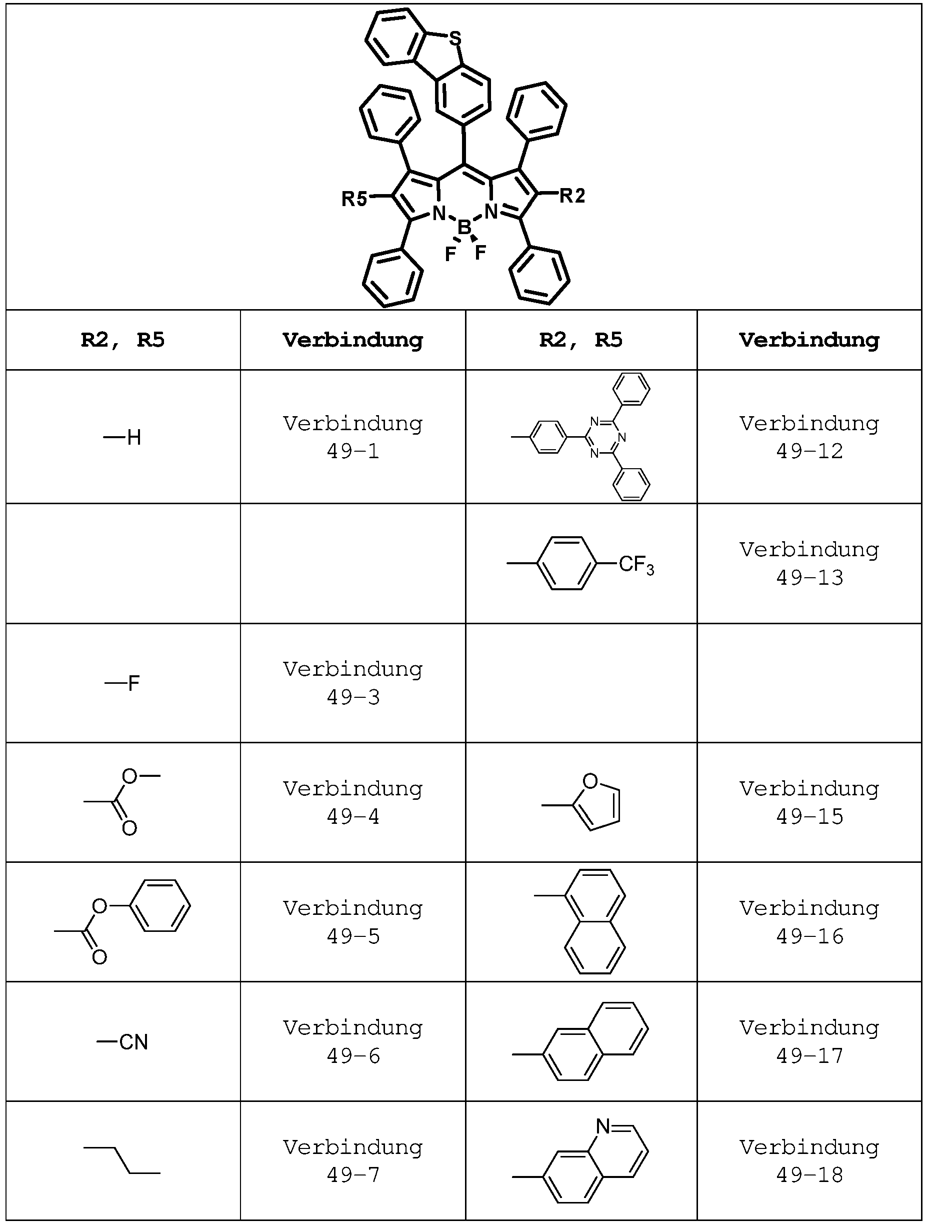 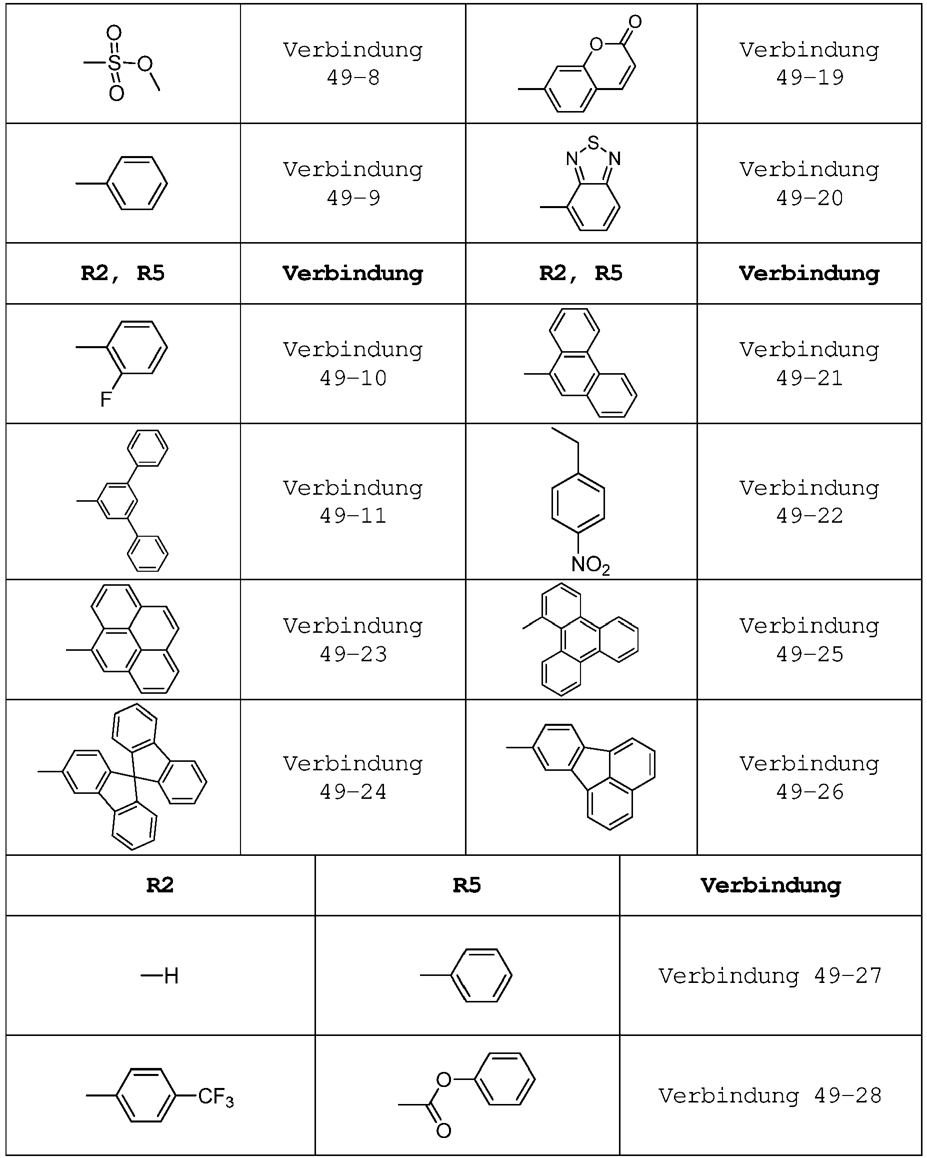 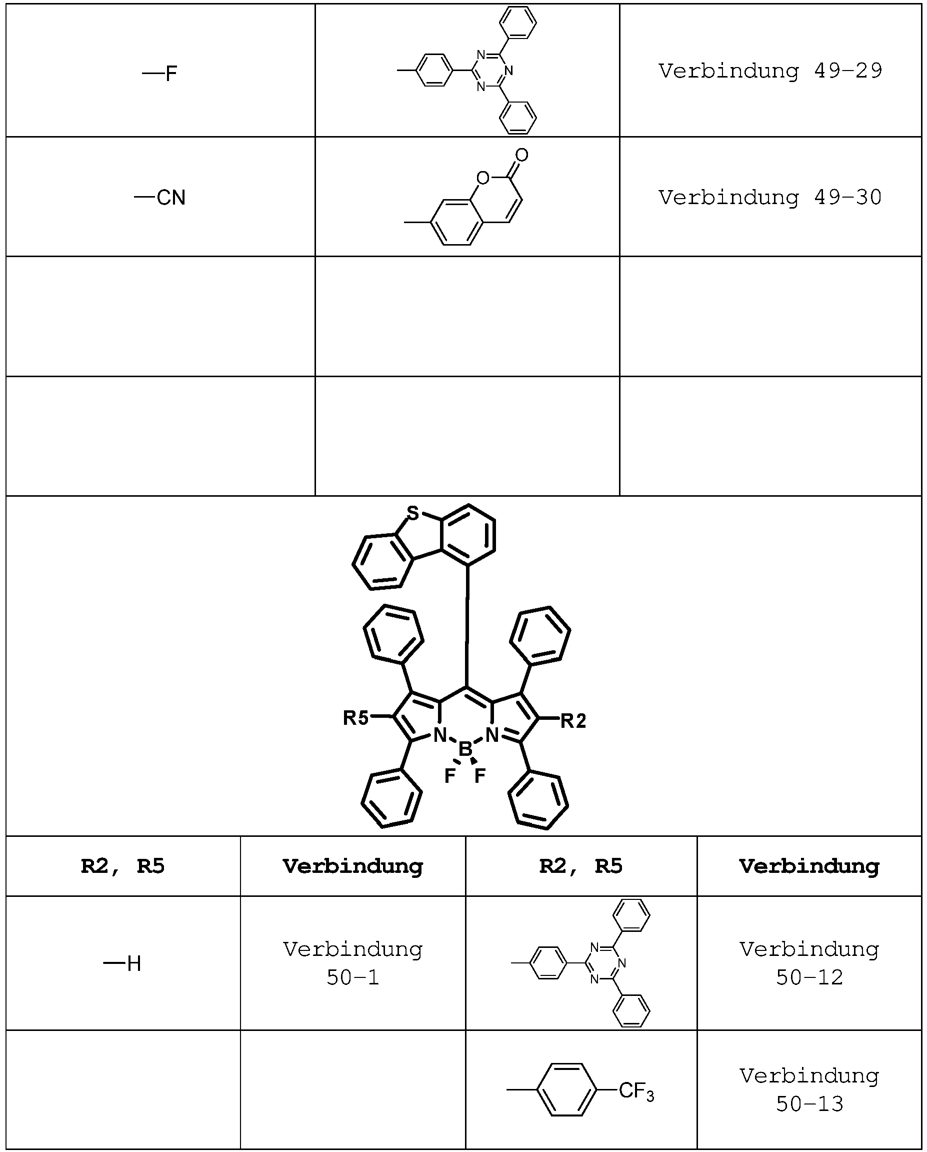 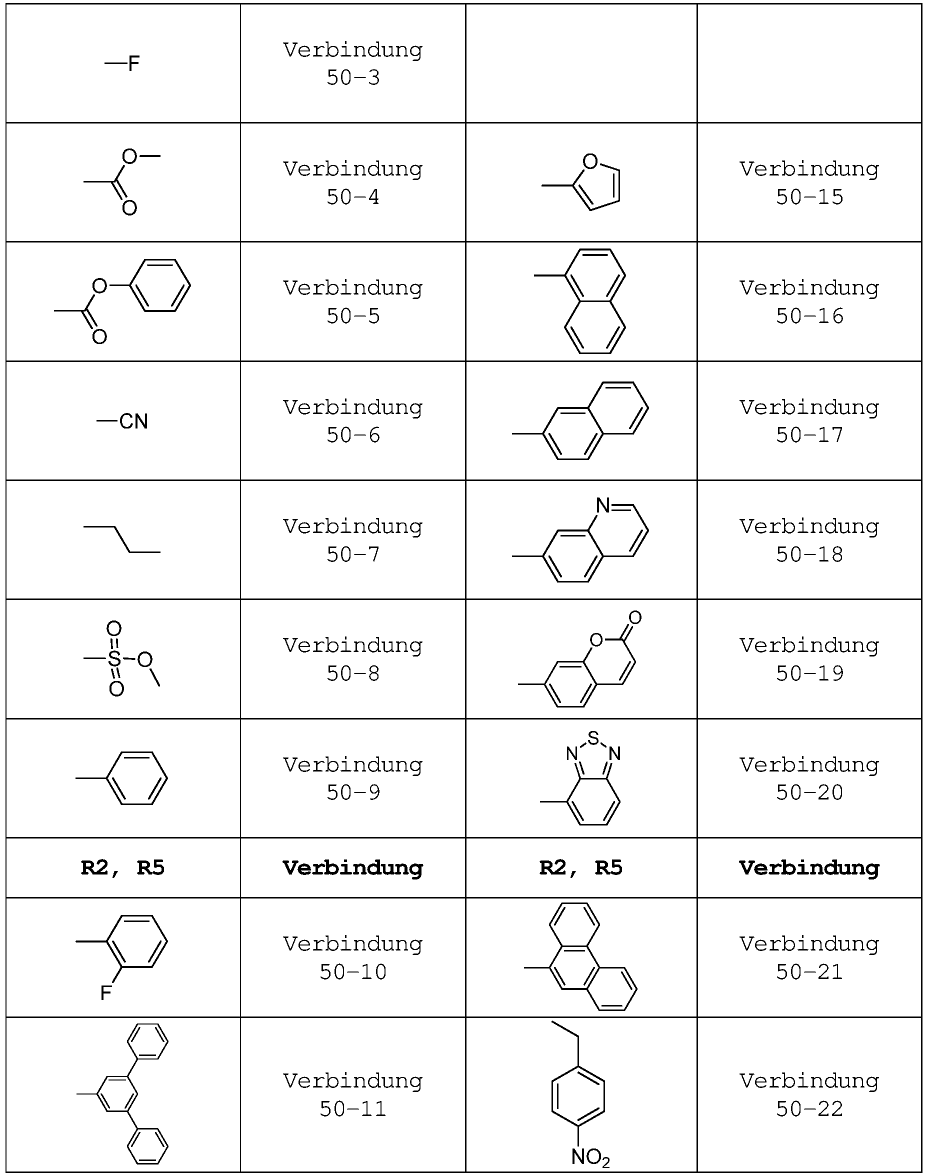 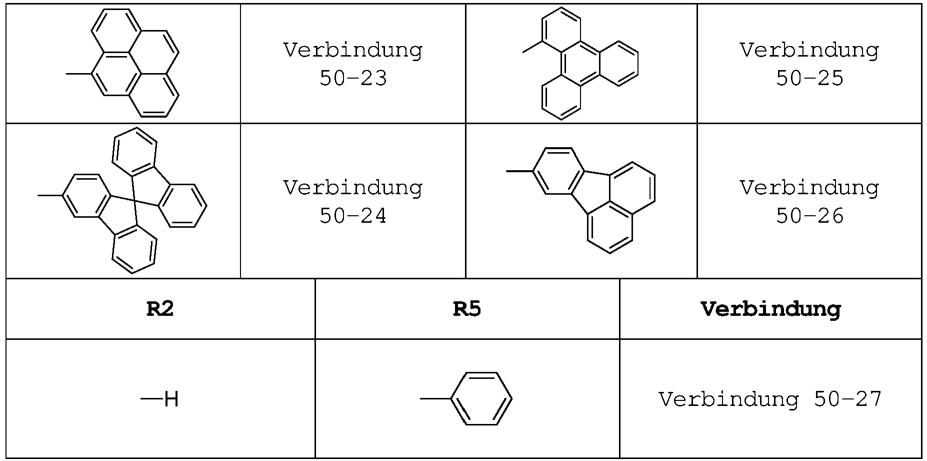 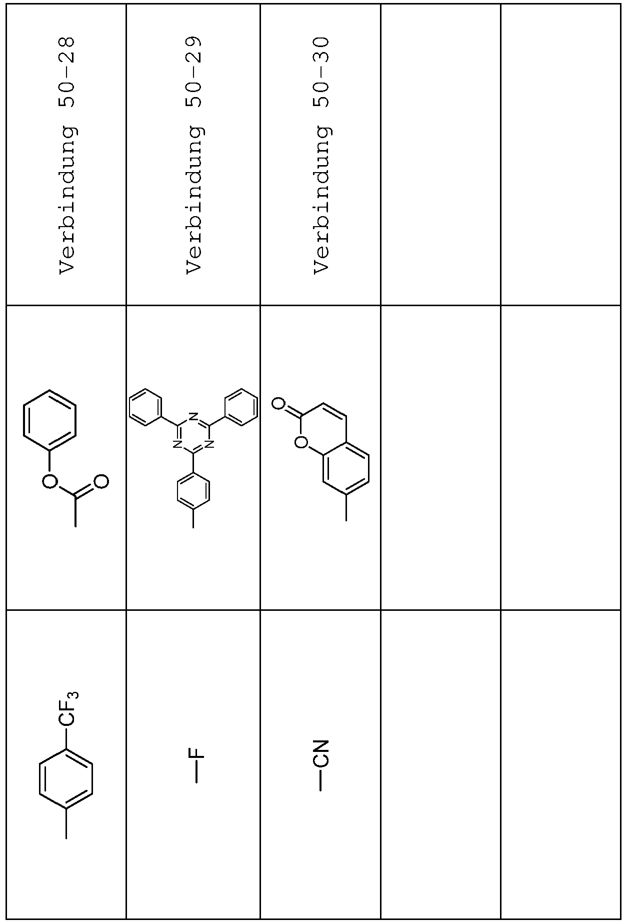
| | | | | | | | |
|---|---|---|---|---|---|---|---|
| 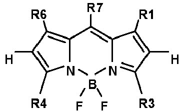 | | R7 | | | | | |
| R1, R6 | R3, R4 | 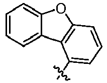 | 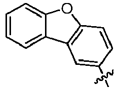 | 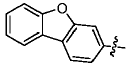 | 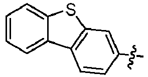 | 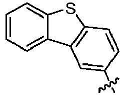 | 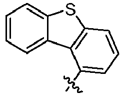 |
| 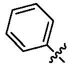 | 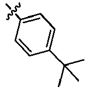 | Verbindung 51-1 | Verbindung 52-1 | Verbindung 53-1 | Verbindung 54-1 | Verbindung 55-1 | Verbindung 56-1 |
| | 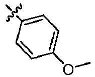 | Verbindung 51-2 | Verbindung 52-2 | Verbindung 53-2 | Verbindung 54-2 | Verbindung 55-2 | Verbindung 56-2 |
| | 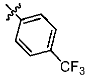 | Verbindung 51-3 | Verbindung 52-3 | Verbindung 53-3 | Verbindung 54-3 | Verbindung 55-3 | Verbindung 56-3 |
| | 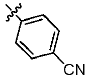 | Verbindung 51-4 | Verbindung 52-4 | Verbindung 53-4 | Verbindung 54-4 | Verbindung 55-4 | Verbindung 56-4 |
| 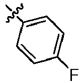 | 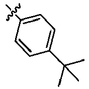 | Verbindung 51-5 | Verbindung 52-5 | Verbindung 53-5 | Verbindung 54-5 | Verbindung 55-5 | Verbindung 56-5 |
| | 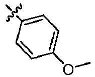 | Verbindung 51-6 | Verbindung 52-6 | Verbindung 53-6 | Verbindung 54-6 | Verbindung 55-6 | Verbindung 56-6 |
| | 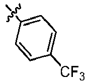 | Verbindung 51-7 | Verbindung 52-7 | Verbindung 53-7 | Verbindung 54-7 | Verbindung 55-7 | Verbindung 56-7 |
| | 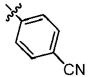 | Verbindung 51-8 | Verbindung 52-8 | Verbindung 53-8 | Verbindung 54-8 | Verbindung 55-8 | Verbindung 56-8 |
| 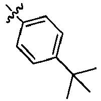 | 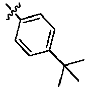 | Verbindung 51-9 | Verbindung 52-9 | Verbindung 53-9 | Verbindung 54-9 | Verbindung 55-9 | Verbindung 56-9 |
| | 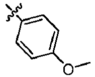 | Verbindung 51-10 | Verbindung 52-10 | Verbindung 53-10 | Verbindung 54-10 | Verbindung 55-10 | Verbindung 56-10 |
| | 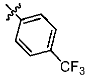 | Verbindung 51-11 | Verbindung 52-11 | Verbindung 53-11 | Verbindung 54-11 | Verbindung 55-11 | Verbindung 56-11 |
| | 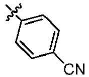 | Verbindung 51-12 | Verbindung 52-12 | Verbindung 53-12 | Verbindung 54-12 | Verbindung 55-12 | Verbindung 56-12 |

8. Farbkonversionsfilm, der
eine Harzmatrix und
die Verbindung, die durch die chemische Formel 1 nach einem der Ansprüche 1 bis 7 dargestellt wird, dispergiert in der Harzmatrix umfasst.

9. Hintergrundbeleuchtungseinheit, die den Farbkonversionsfilm von Anspruch 8 umfasst.

10. Anzeigegerät, das die Hintergrundbeleuchtungseinheit von Anspruch 9 umfasst.

## Revendications

1. Composé représenté par la formule chimique 1 suivante : 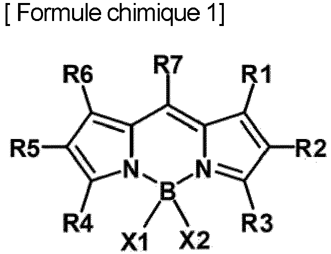 où, dans la formule chimique 1,
X1 et X2 sont identiques ou différents l'un de l'autre, et chacun représente indépendamment un groupe halogène ; un groupe nitrile ; un groupe alkyle substitué ou non substitué ; ou un groupe alcoxy substitué ou non substitué ;
R1, R3, R4 et R6 sont identiques ou différents les uns des autres, et représentent chacun indépendamment
un groupe phényle non substitué ou substitué par un groupe nitrile, un groupe halogène, un groupe arylamine, un groupe alcoxy ou un groupe alkyle non substitué ou substitué par un groupe halogène ; un groupe pyridyle non substitué ou substitué par un groupe alkyle ; ou un groupe dibenzofuranyle ;
R2 et R5 sont identiques ou différents l'un de l'autre, et chacun indépendamment
hydrogène ; un groupe fluoro ; un groupe nitrile ; un groupe méthylester ; un groupe phénylester ; un groupe méthylsulfoxy ; un groupe méthyle substitué par un groupe phényle substitué par un groupe nitro ; un groupe éthyle ; un groupe n-propyle ; un groupe coumarine ; un groupe phényle non substitué ou substitué par un groupe fluoro, un groupe trifluorométhyle, un groupe phényle, un groupe biphényle ou un groupe triazinyle substitué par un groupe phényle ; un groupe biphényle substitué par un groupe phényle ; un groupe terphényle ; un groupe pyrimidyle ; un groupe furanyle ; un groupe naphtyle ; un groupe quinolyle ; un groupe benzothiadiazolyle ; un groupe phénanthrényle ; un groupe pyrényle ; un groupe triphénylényle ; un groupe spirobifluorényle ; ou un groupe fluoranthényle; R7 est un groupe représenté par la formule chimique 2 suivante ; 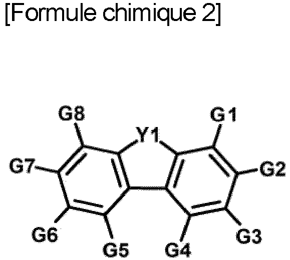
dans la formule chimique 2,
Y1 représente O ou S ;
l'un quelconque des G1 à G8 représente un site se liant à la formule chimique 1, et les autres sont identiques ou différents les uns des autres et chacun représente indépendamment l'hydrogène ; ou des groupes adjacents se lient les uns aux autres pour former un cycle substitué par R',
lorsque des groupes adjacents parmi G1 à G8 se lient entre eux pour former un cycle substitué par R', l'un quelconque des groupes parmi G1 à G8 ne formant pas le cycle par le groupe adjacent se liant entre eux et R' est un site se liant à la formule chimique 1 et les autres de R' représentent l'hydrogène.

2. Composé selon la revendication 1, dans lequel la formule chimique 2 est représentée par l'une quelconque des formules chimiques 2-1 à 2-3 suivantes : 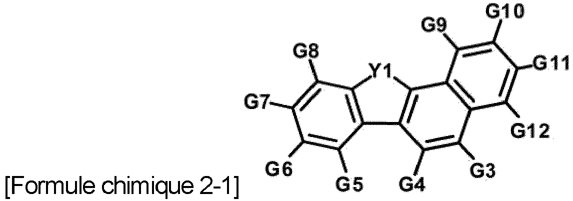 où, dans la formule chimique 2-1,
Y1 a la même définition que dans la formule chimique 2 ;
l'un quelconque de G3 à G12 est un site de liaison à la formule chimique 1, et les autres représentent l'hydrogène 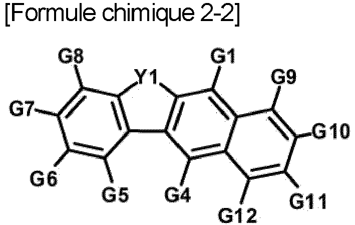
dans la formule chimique 2-2,
Y1 a la même définition que dans la formule chimique 2 ;
l'un quelconque de G1 et de G4 à G12 est un site de liaison à la formule chimique 1, et les autres représentent l'hydrogène 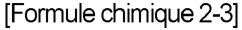 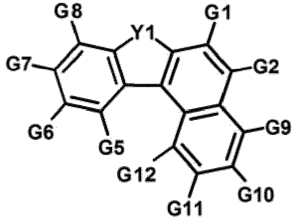
dans la formule chimique 2-3,
Y1 a la même définition que dans la formule chimique 2; et
l'un quelconque de G1, G2 et de G5 à G12 est un site de liaison à la formule chimique 1, et les autres représentent l'hydrogène.

3. Composé selon la revendication 1, dans lequel la formule chimique 1 est représentée par l'une quelconque des formules chimiques 1-1 à 1-4 suivantes : 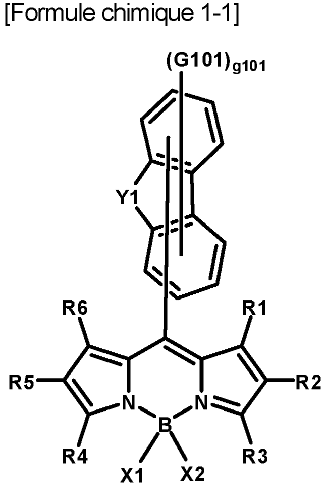 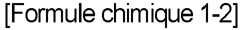 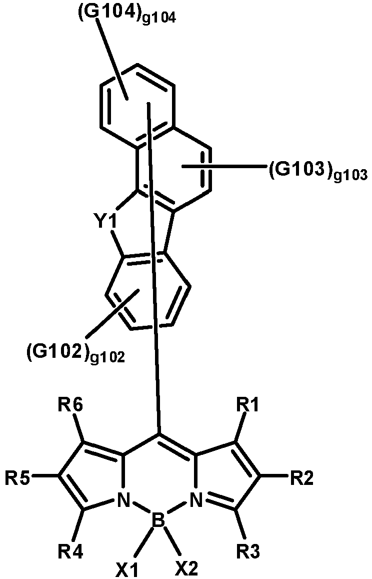 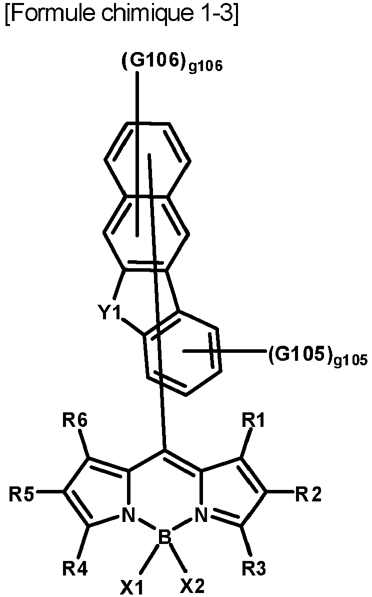 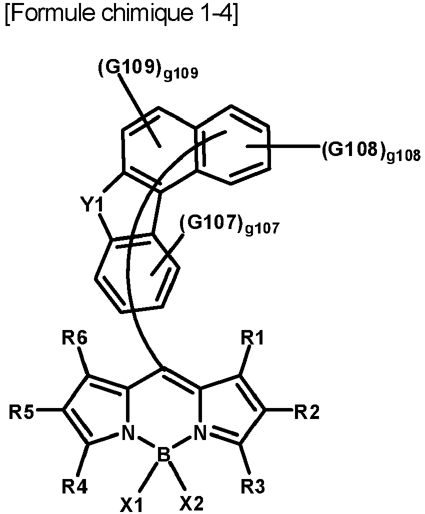 où, dans les formules chimiques 1-1 à 1-4,
R1 à R6, et X1 et X2 ont les mêmes définitions que dans la formule chimique 1 ;
Y1 a la même définition que dans la formule chimique 2 ;
G101 à G109 représentent l'hydrogène ;
g101 représente un nombre entier valant de 1 à 7 ;
g102, g104, g105, g107 et g108 représentent chacun un nombre entier valant de 1 à 4 ;
g103 et g109 sont chacun égaux à 1 ou 2 ;
g106 représente un nombre entier valant de 1 à 6 ;
3 ≤ g102 + g103 + g104 ≤ 9 ;
2 ≤ g105 + g106 ≤ 9 ;
3 ≤ g107 + g108 + g109 ≤ 9 ; et
lorsque g101 à g109 représentent chacun un nombre multiple, les structures entre parenthèses sont identiques ou différentes les unes des autres.

4. Composé selon la revendication 1, qui a un pic d'émission de lumière maximum présent dans la plage de 610 nm à 660 nm à l'état de film.

5. Composé selon la revendication 1, qui a un pic d'émission de lumière maximum présent dans la plage de 610 nm à 660 nm à l'état de film, et le pic d'émission de lumière a une largeur totale à la moitié maximum de 60 nm ou inférieure.

6. Composé selon la revendication 1, qui a une efficacité quantique de 0,76 ou supérieure.

7. Composé selon la revendication 1, dans lequel la formule chimique 1 est sélectionnée parmi les composés suivants : 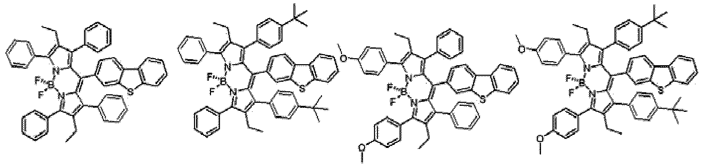 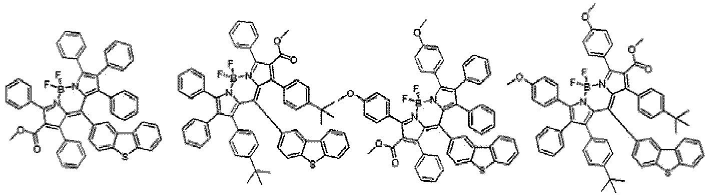 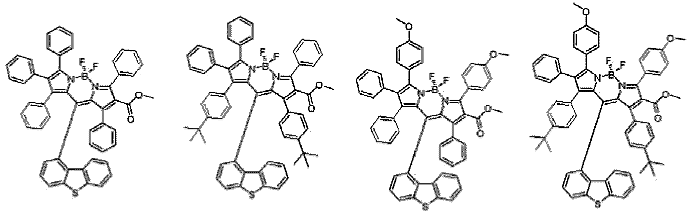 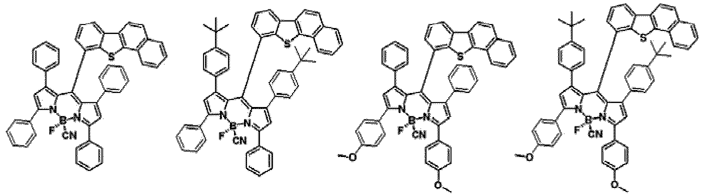 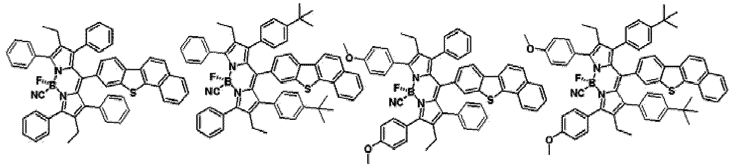 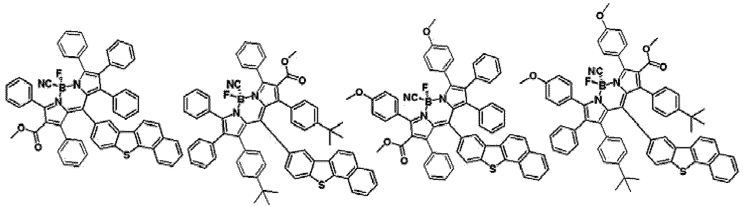 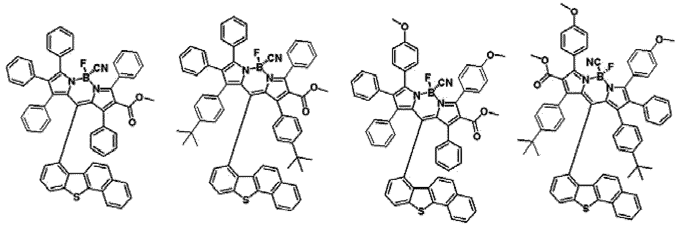 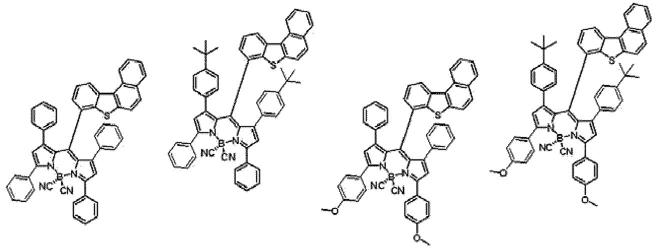 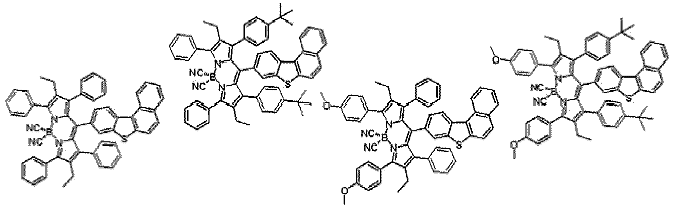 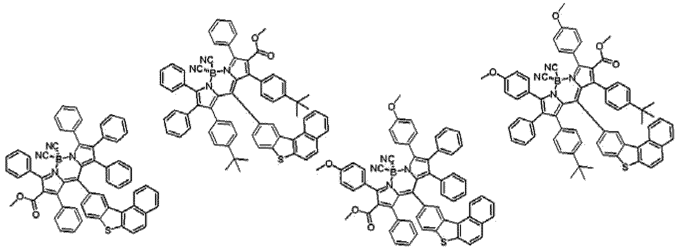 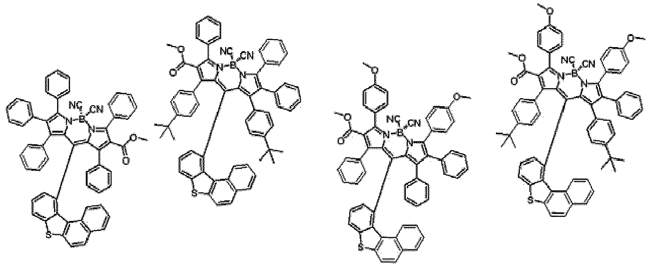 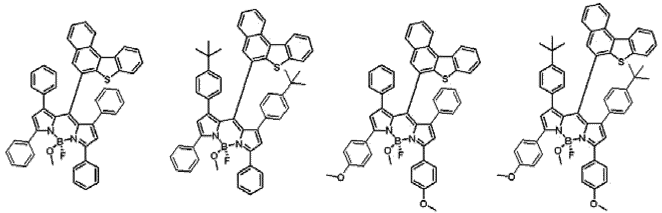 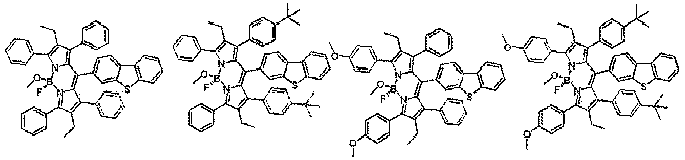 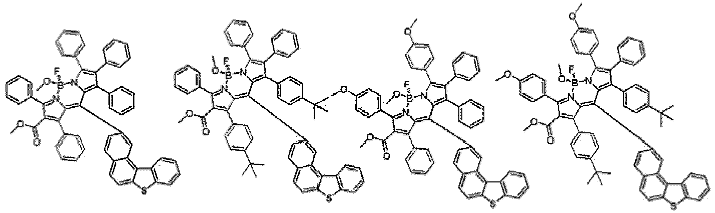 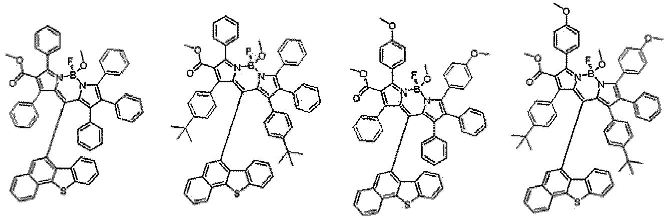 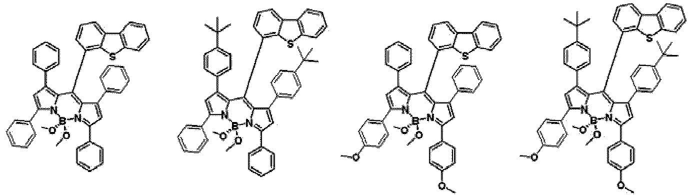 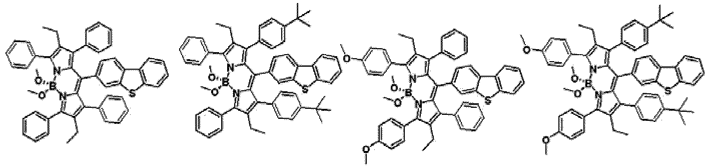 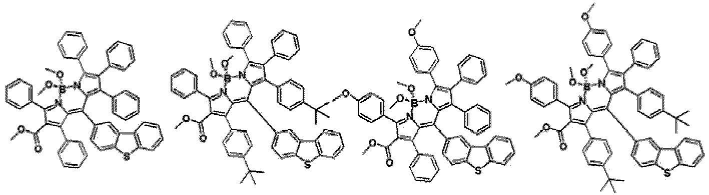 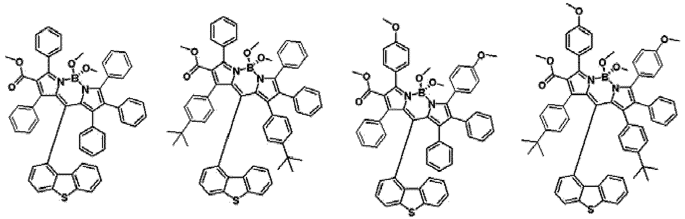 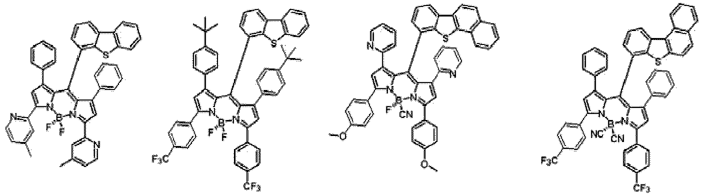 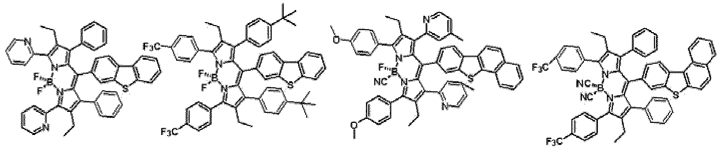 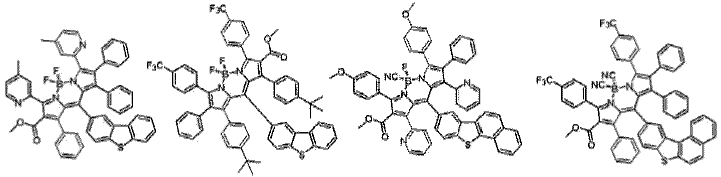 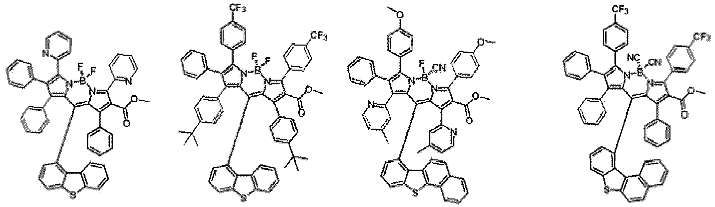 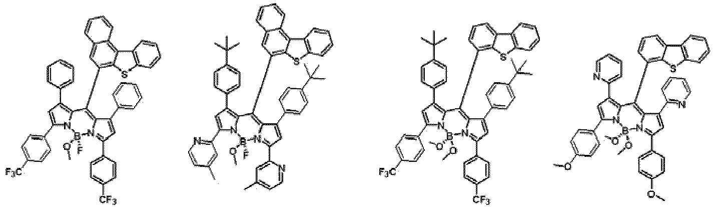 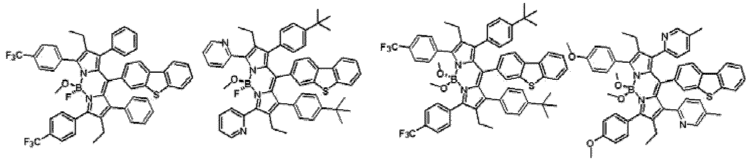 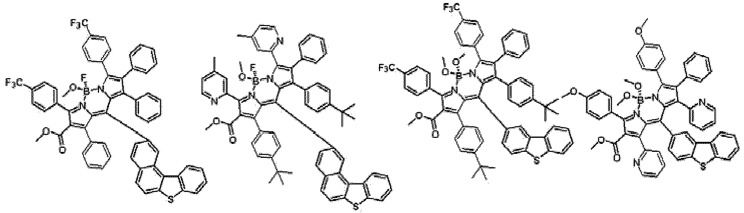 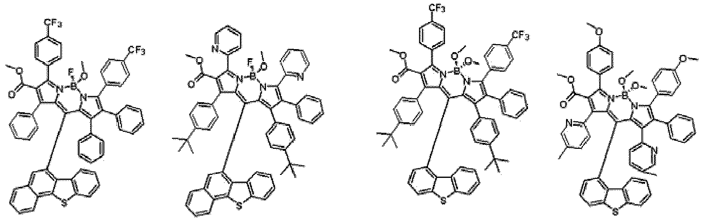 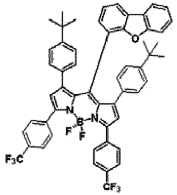 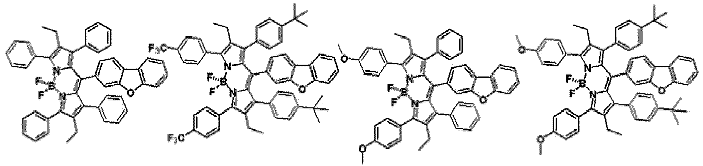 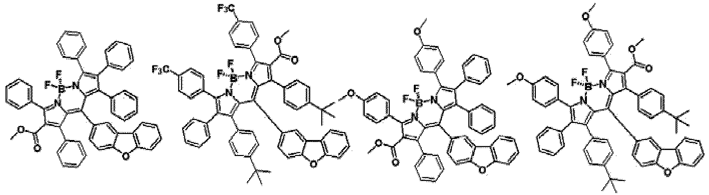 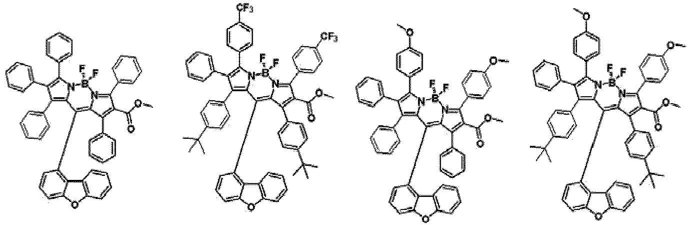 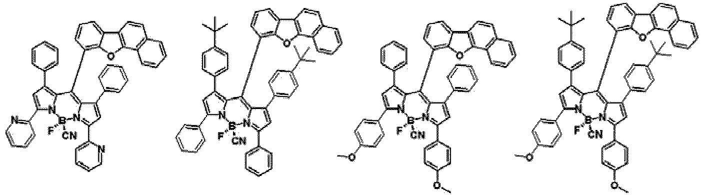 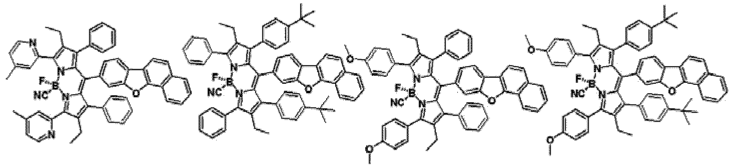 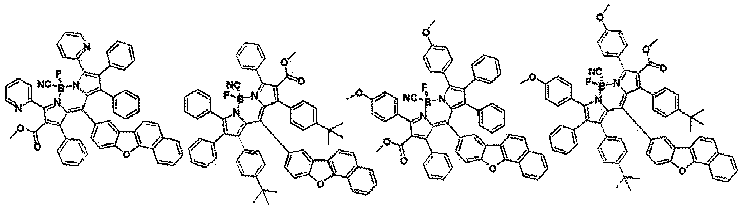 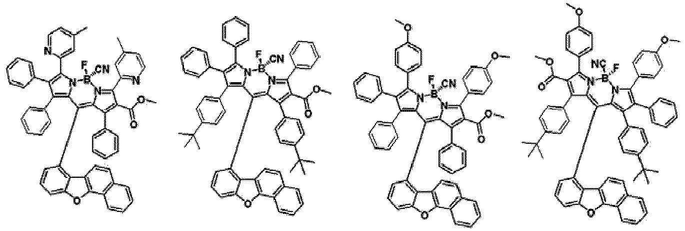 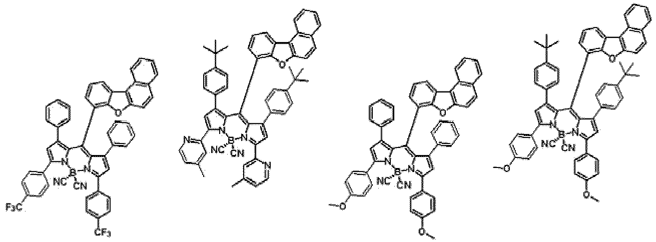 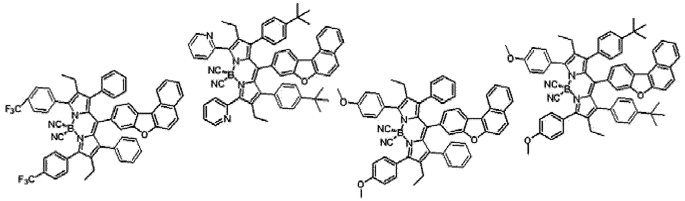 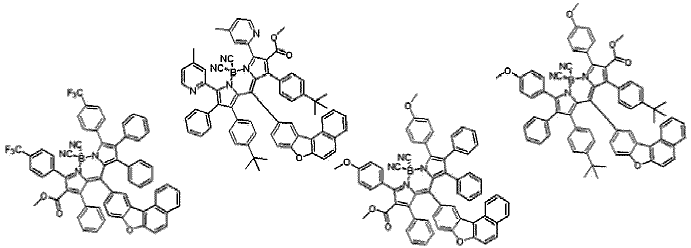 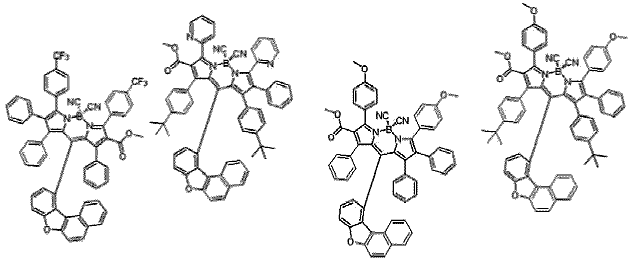 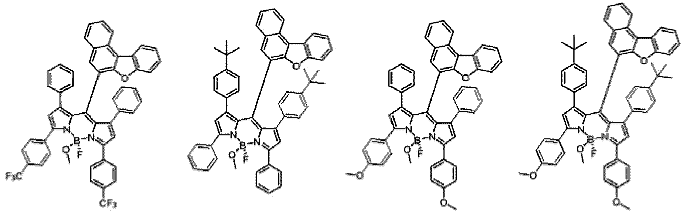 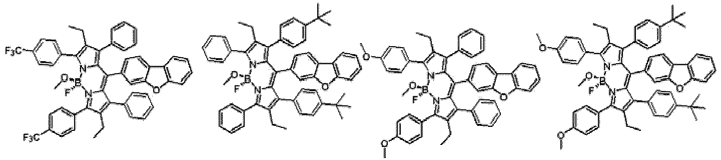 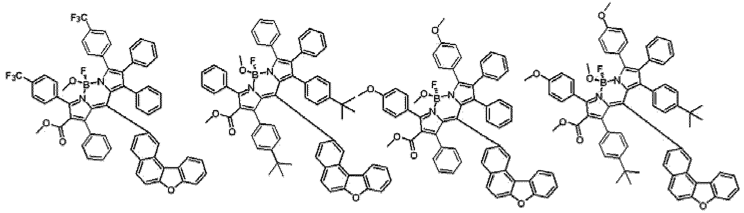 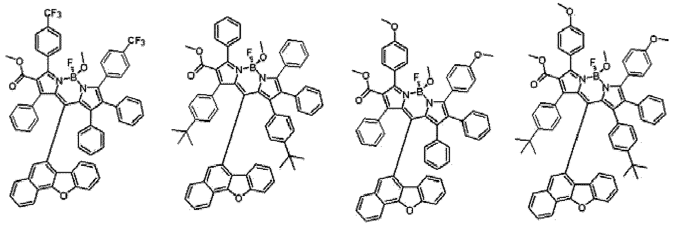 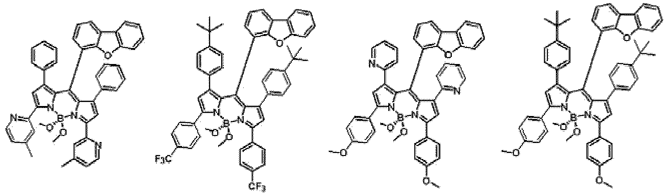 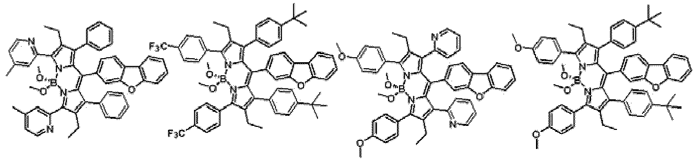 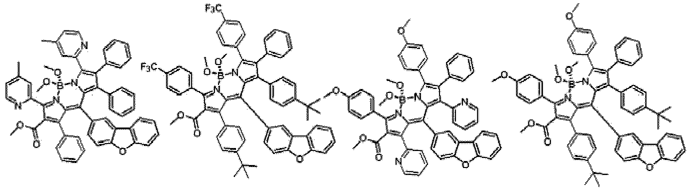 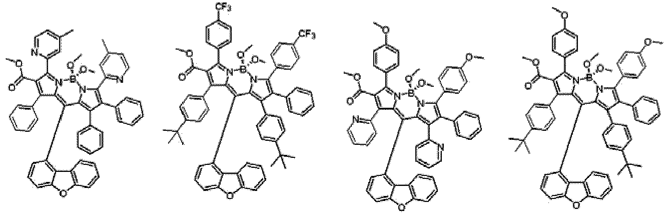 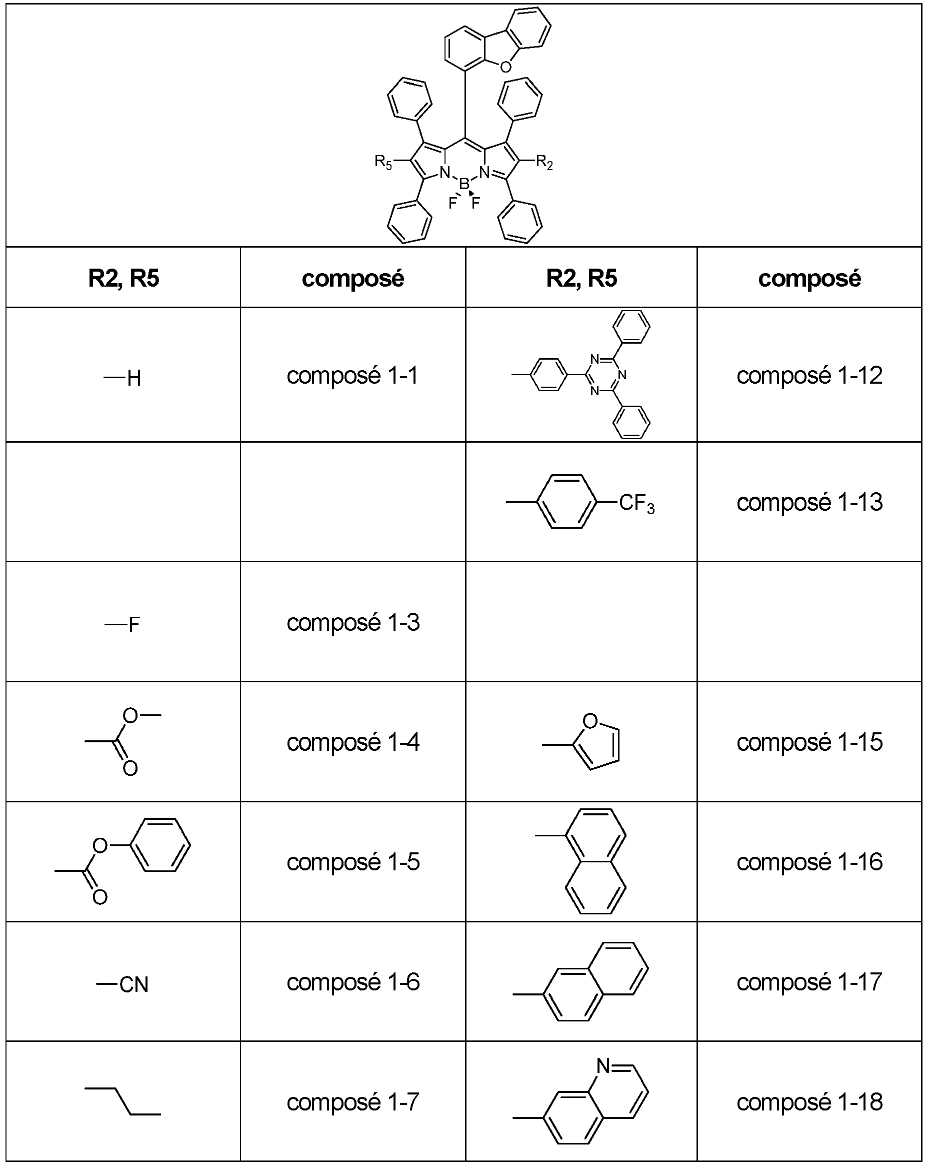 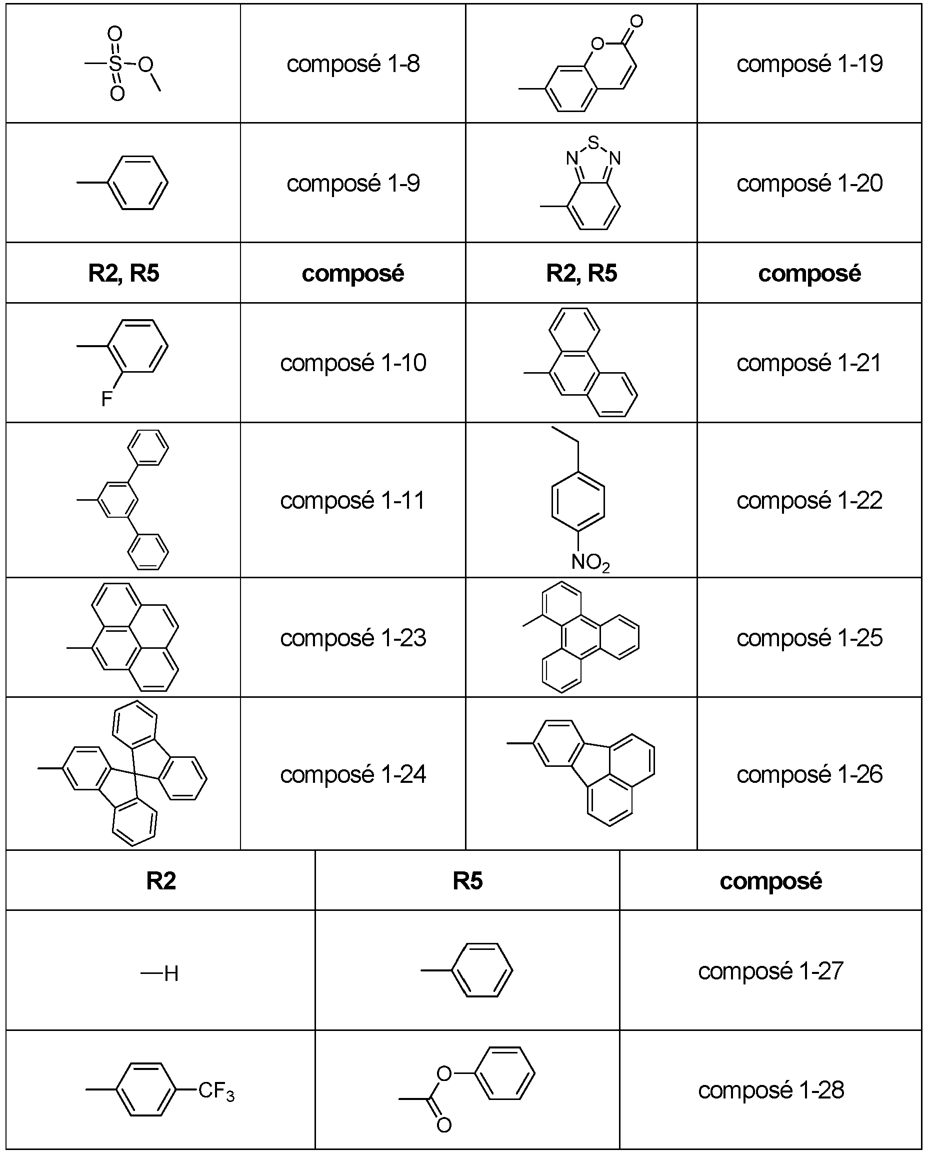 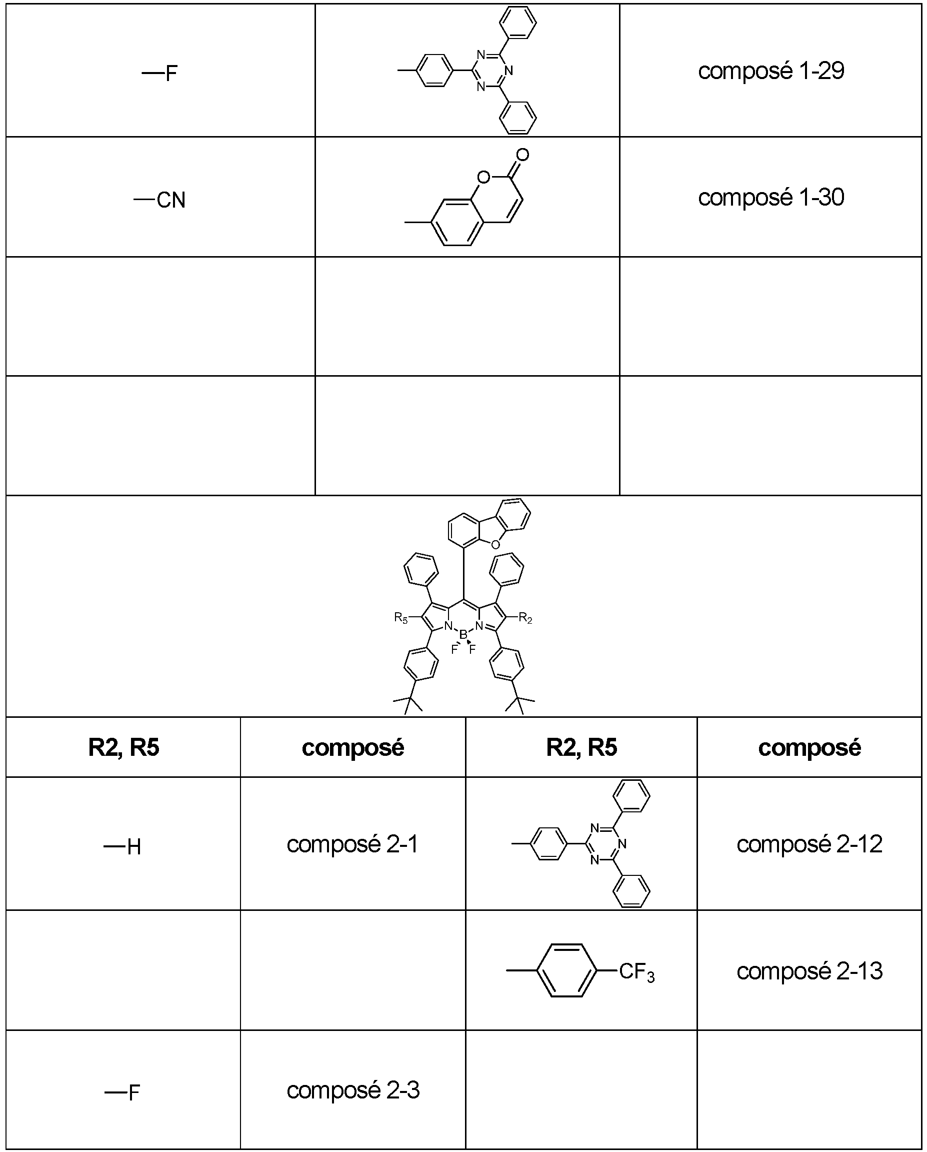 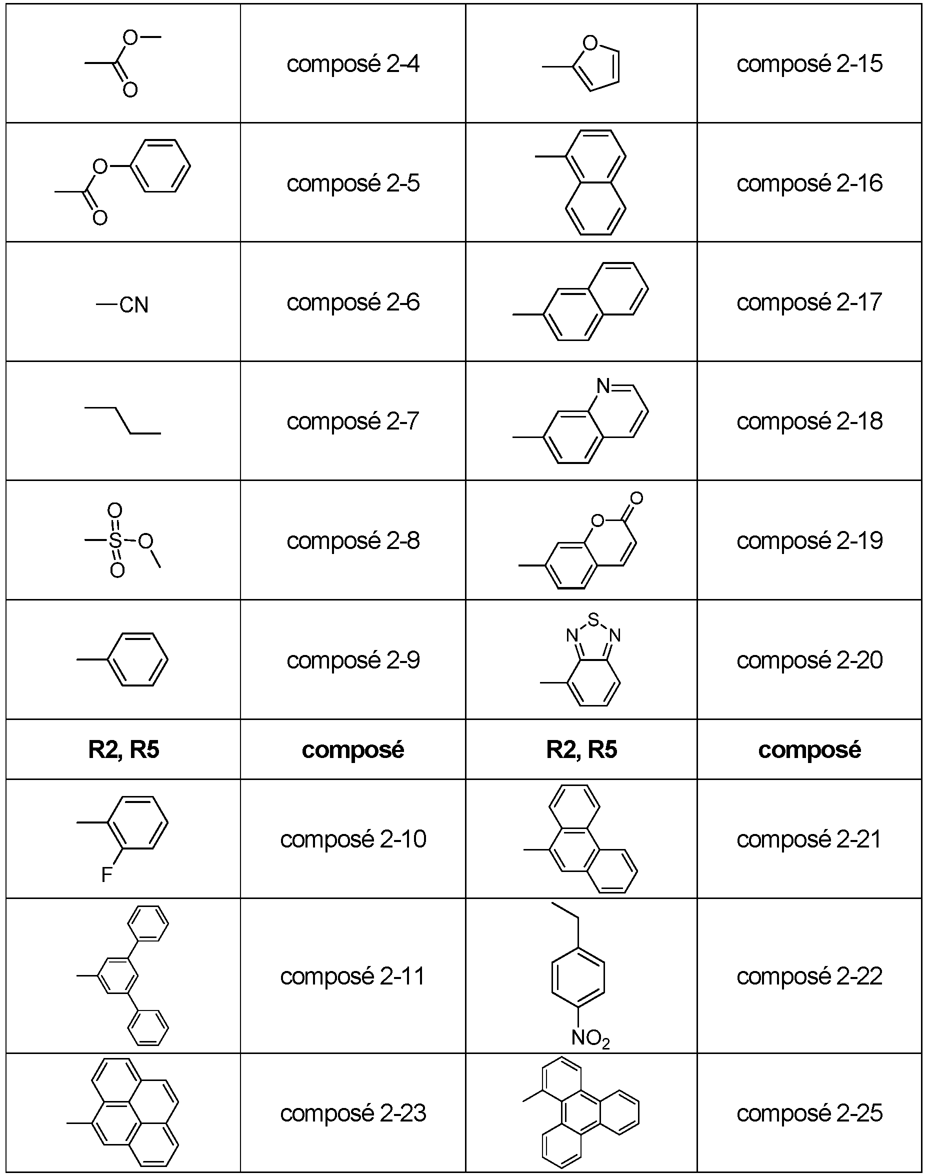 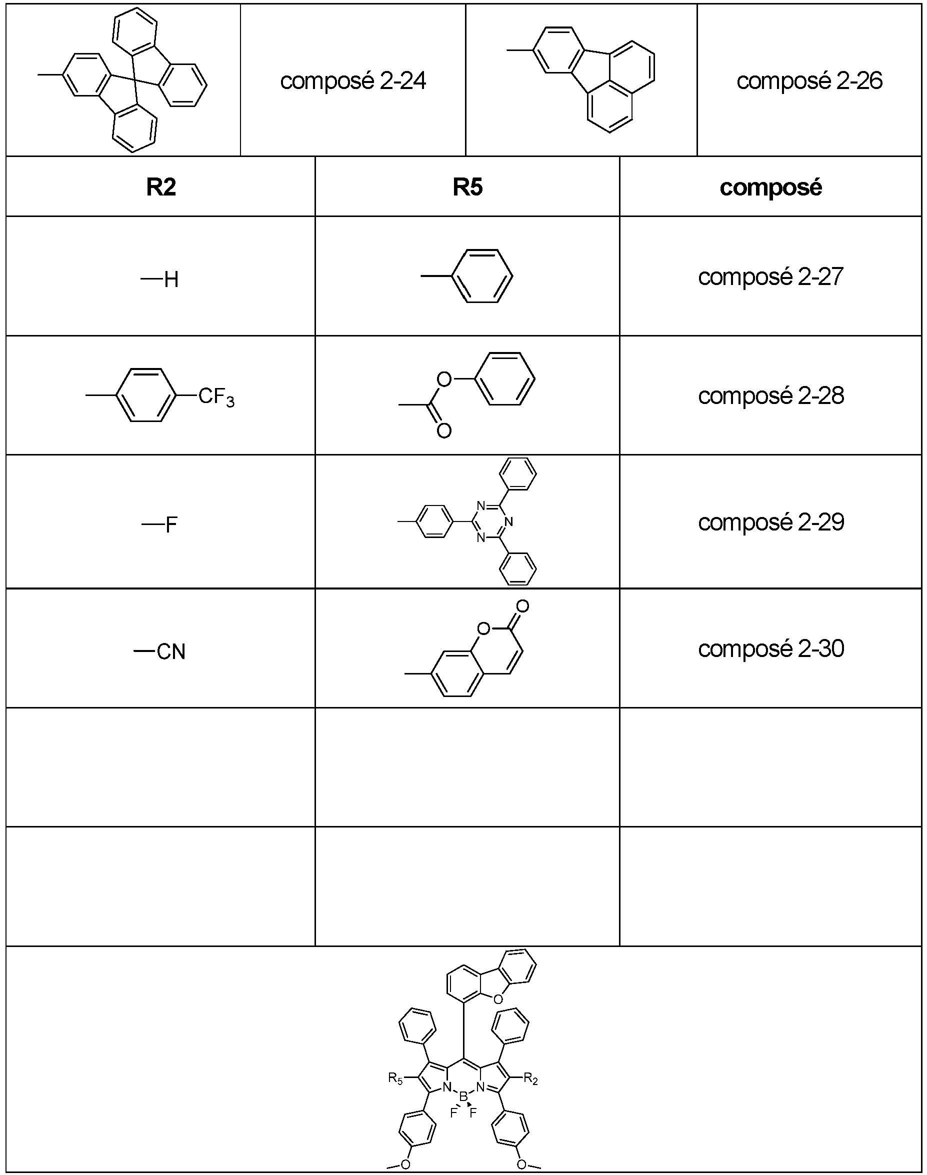 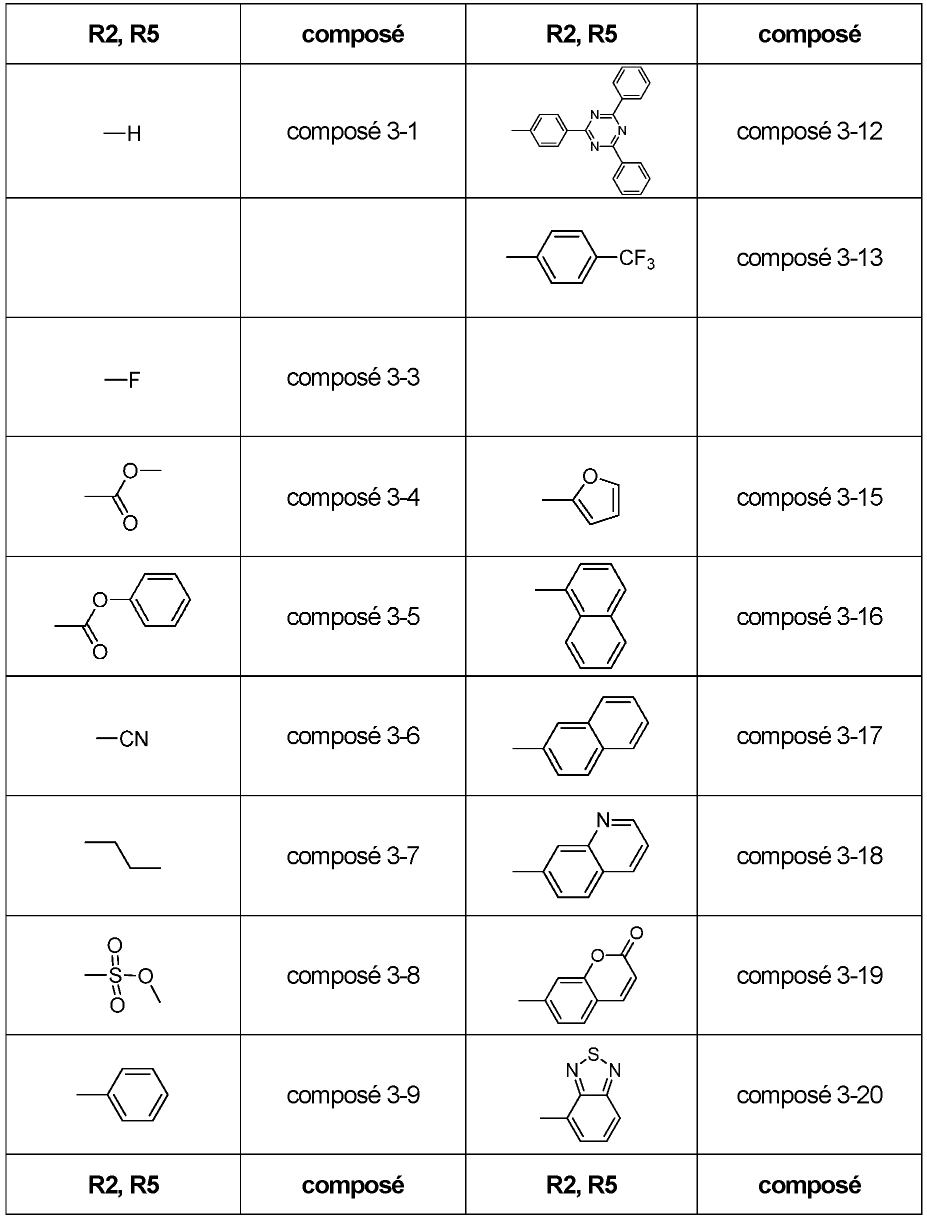 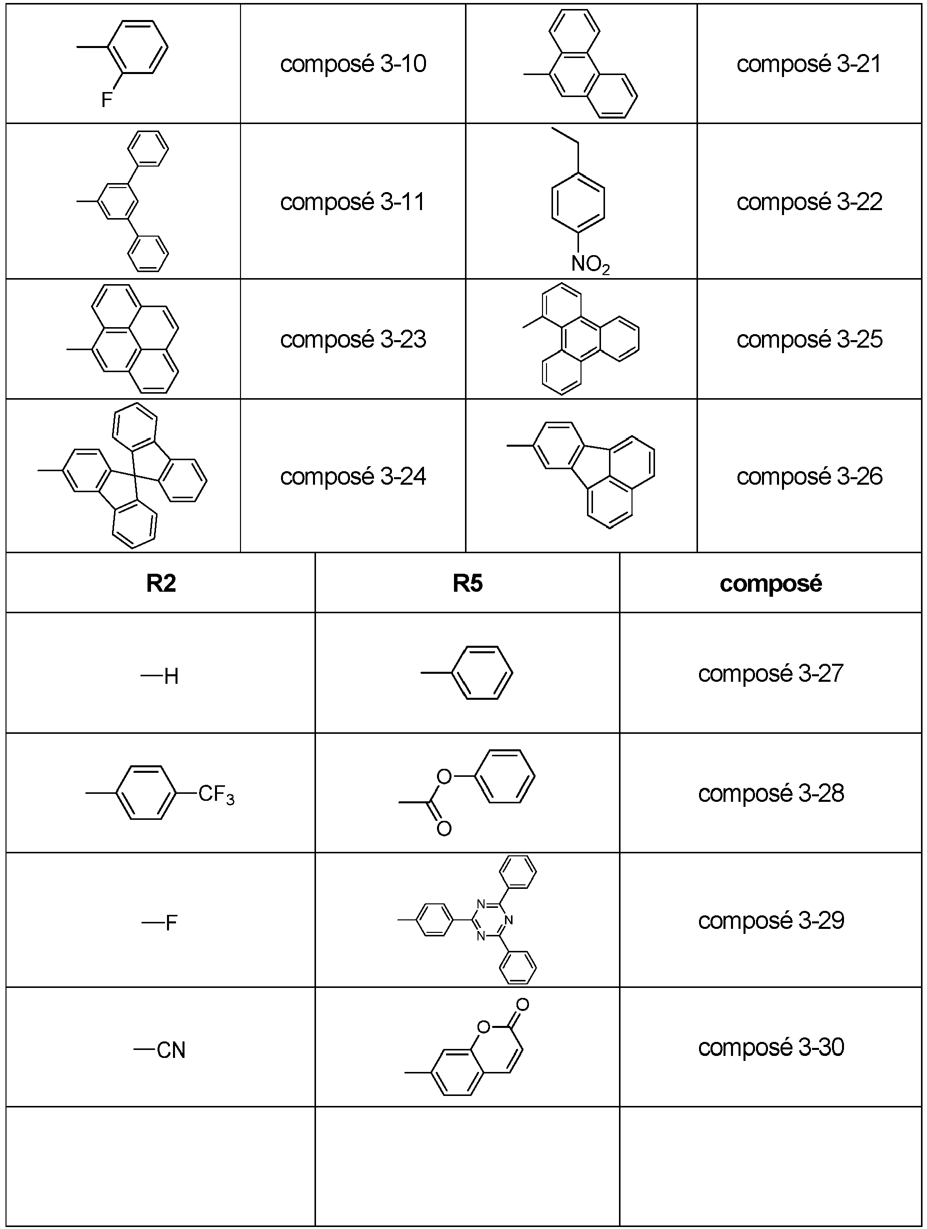 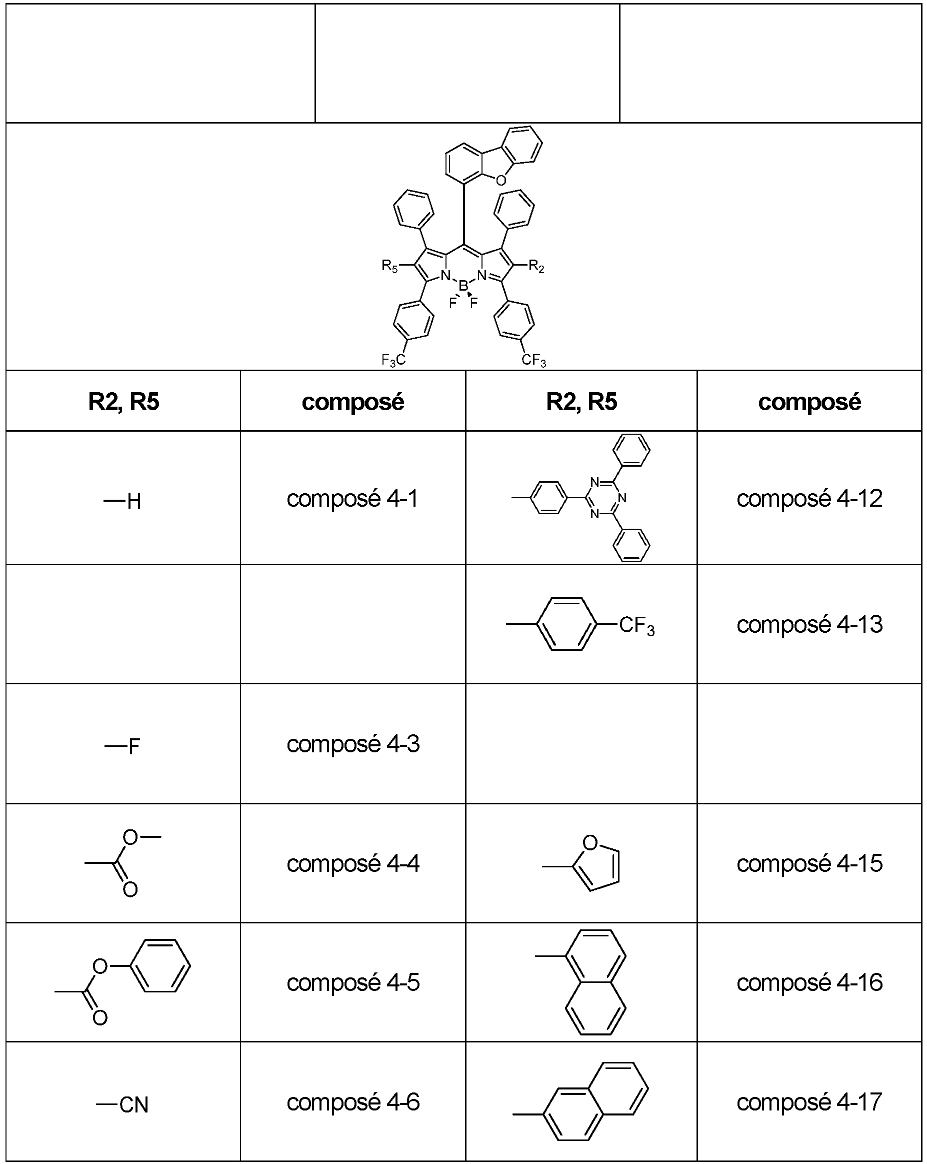 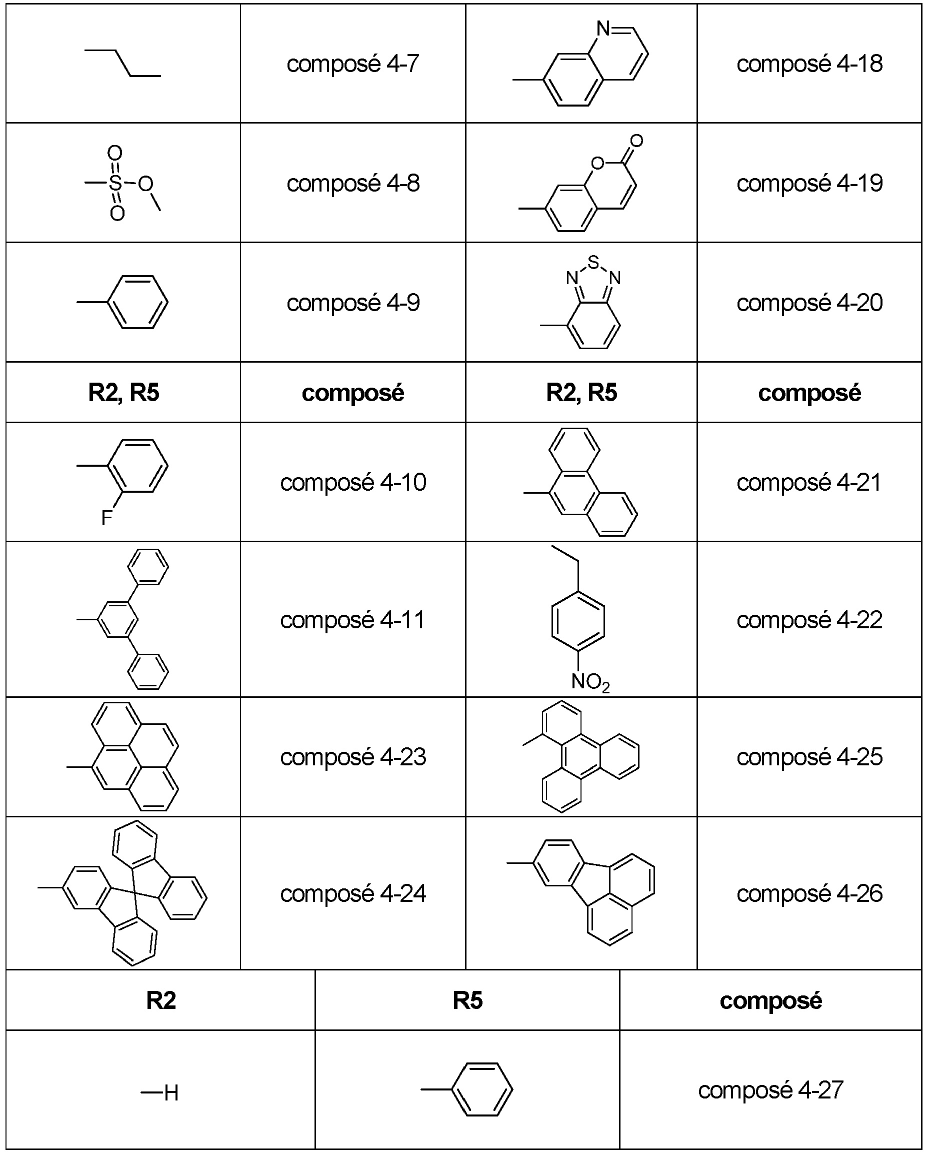 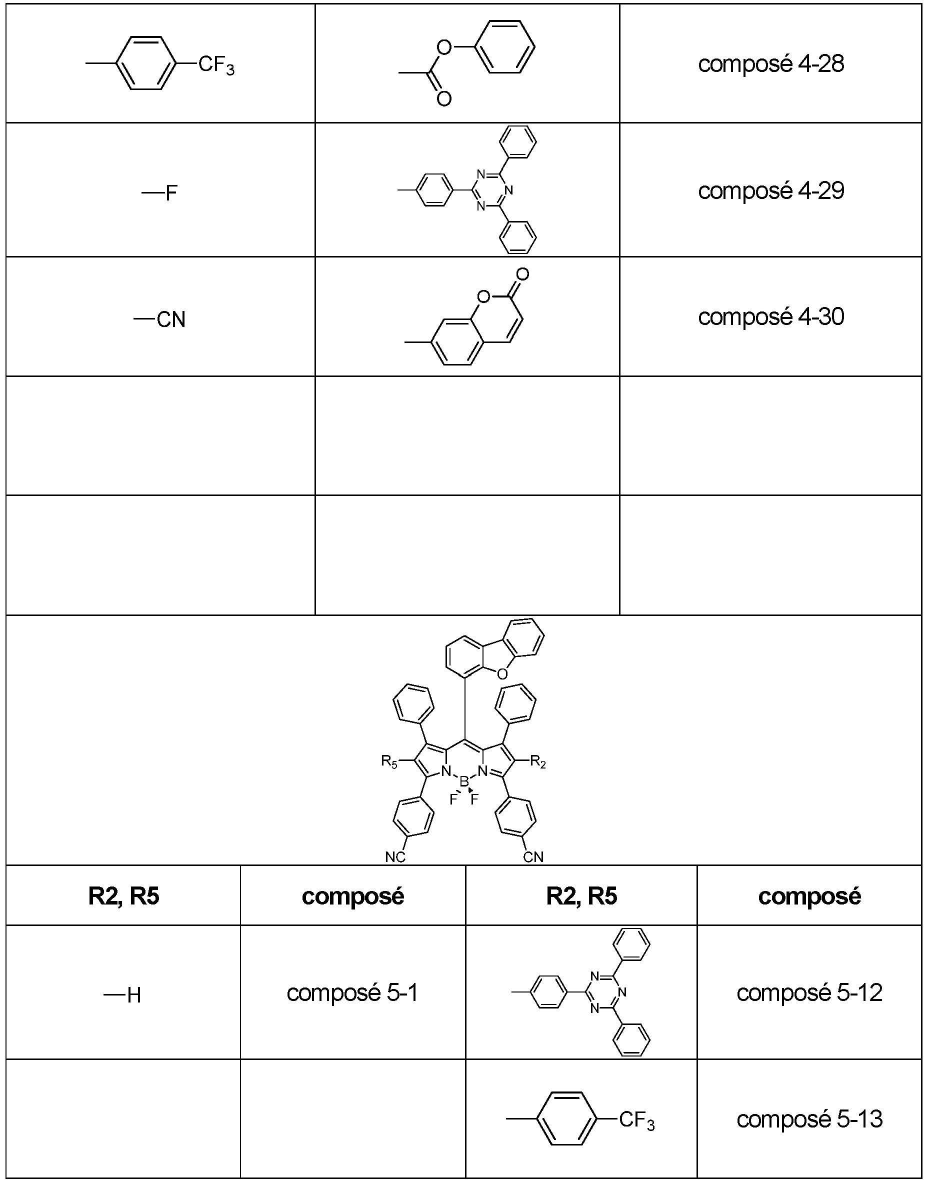 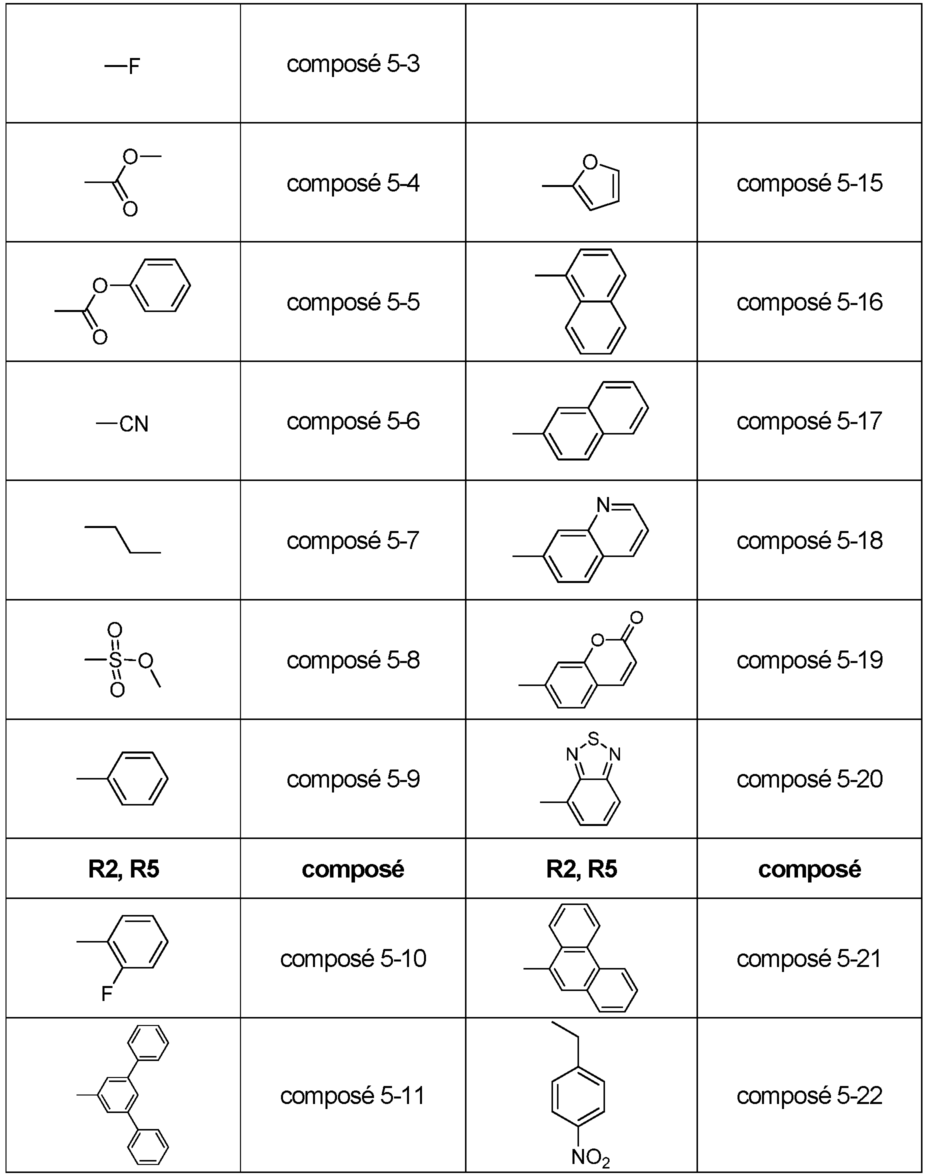 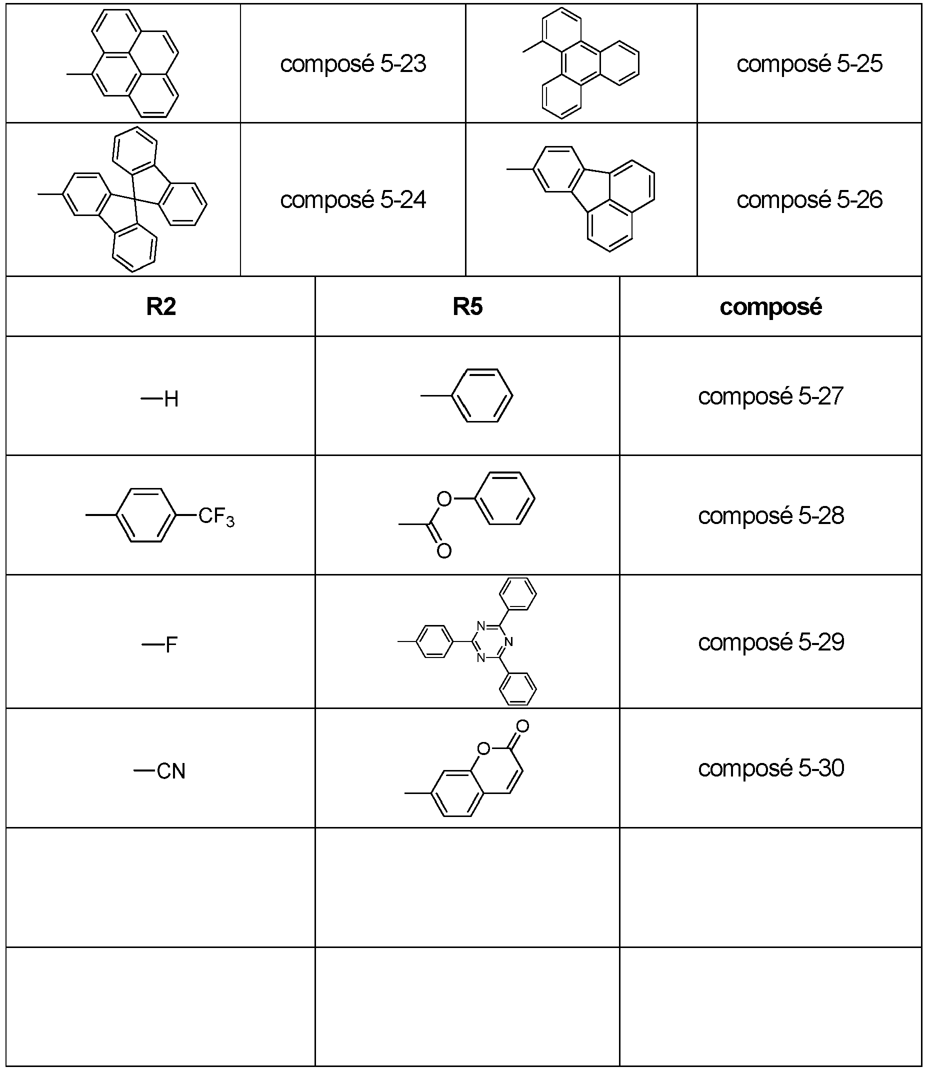 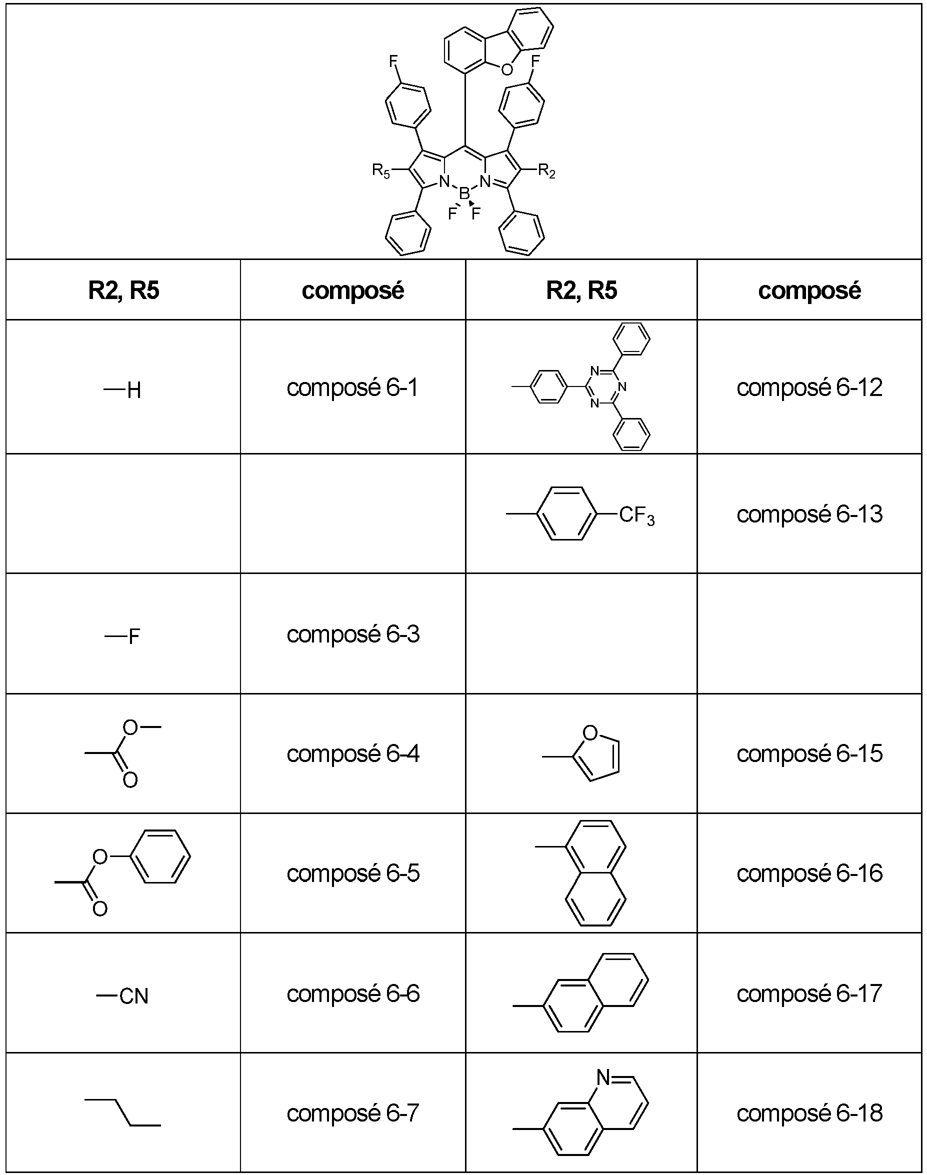 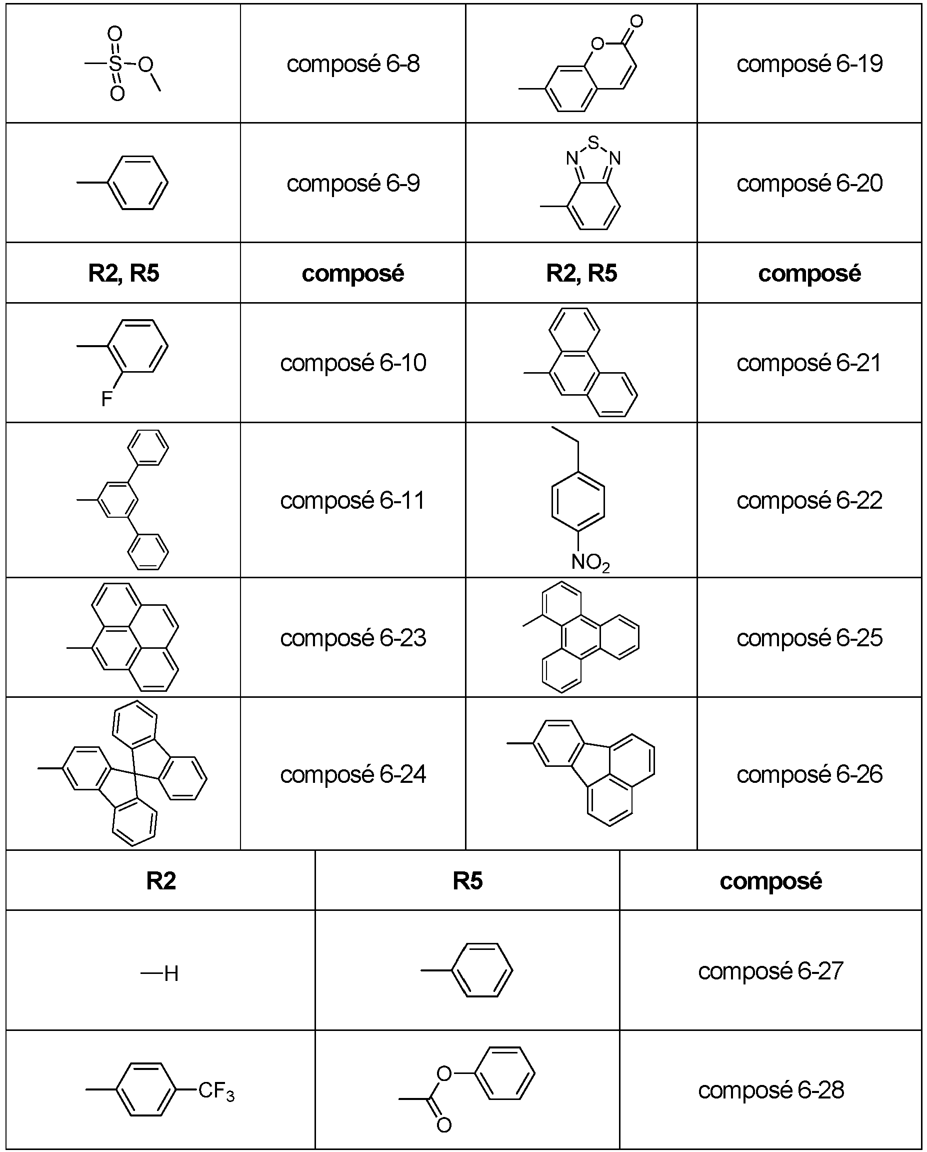 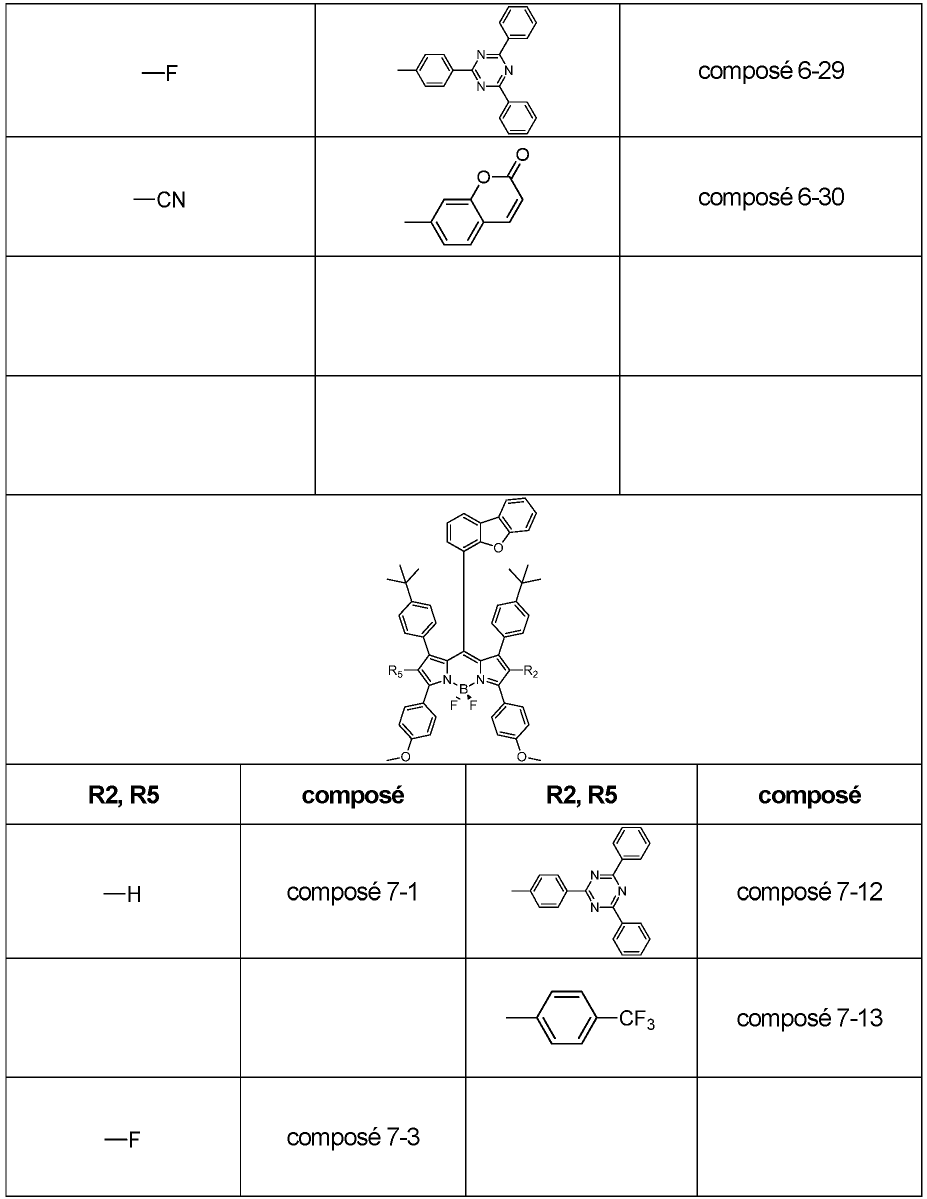 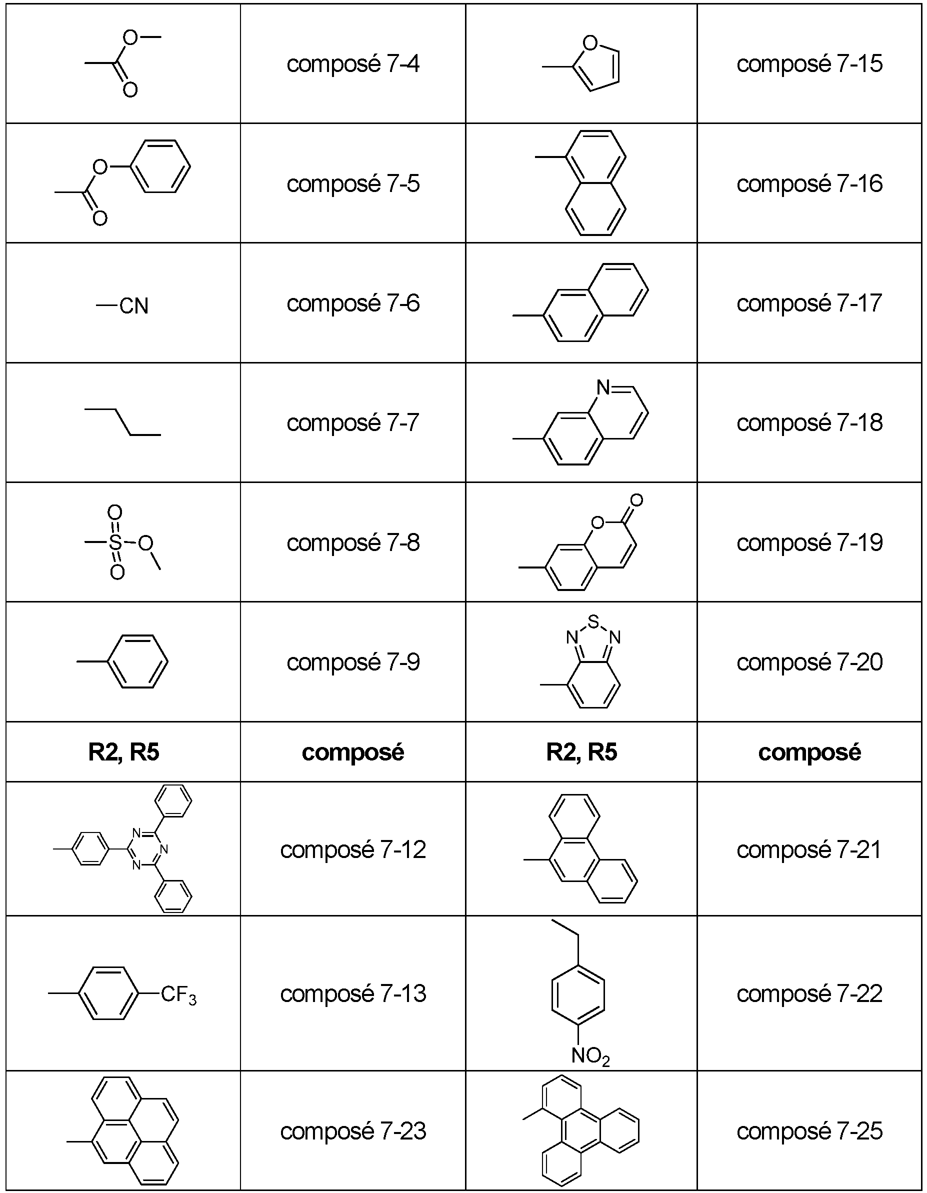 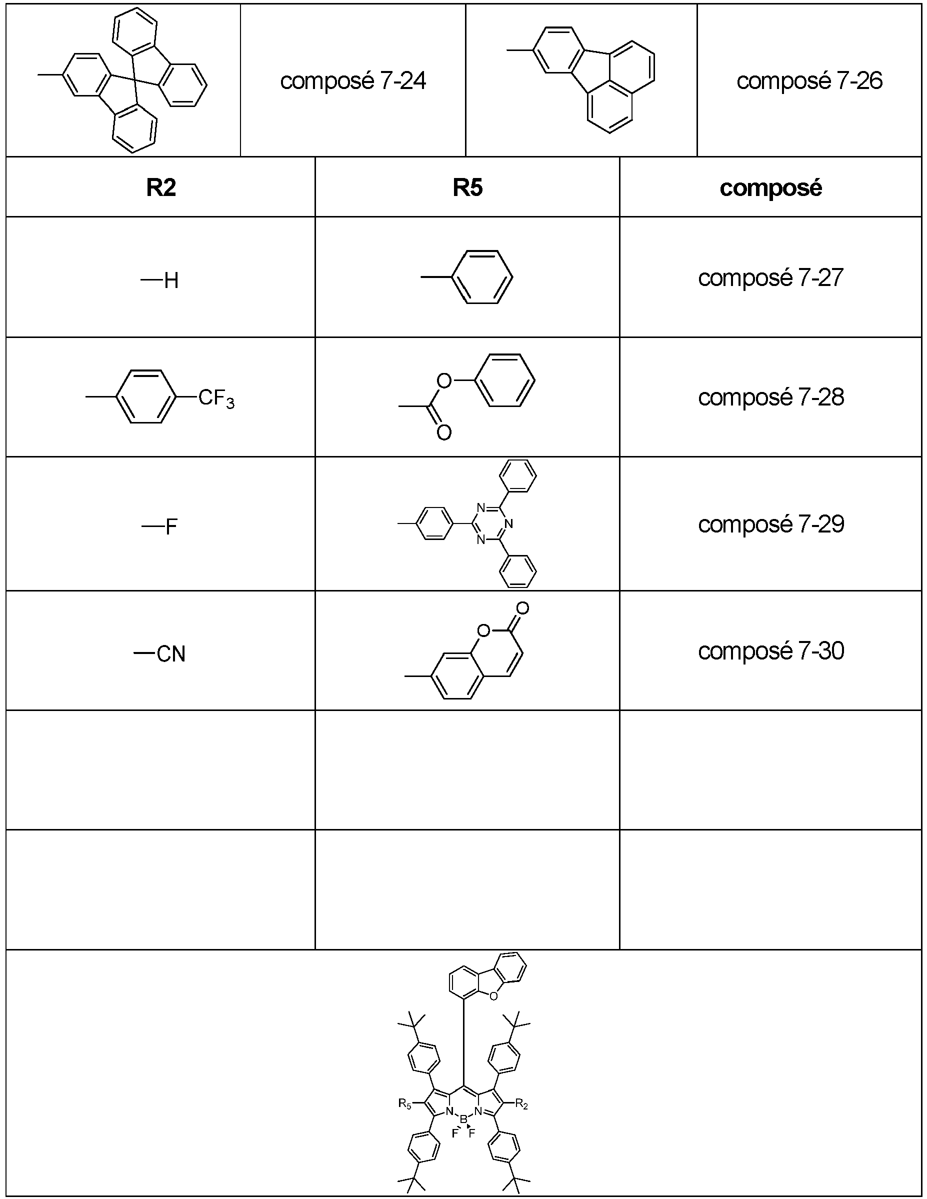 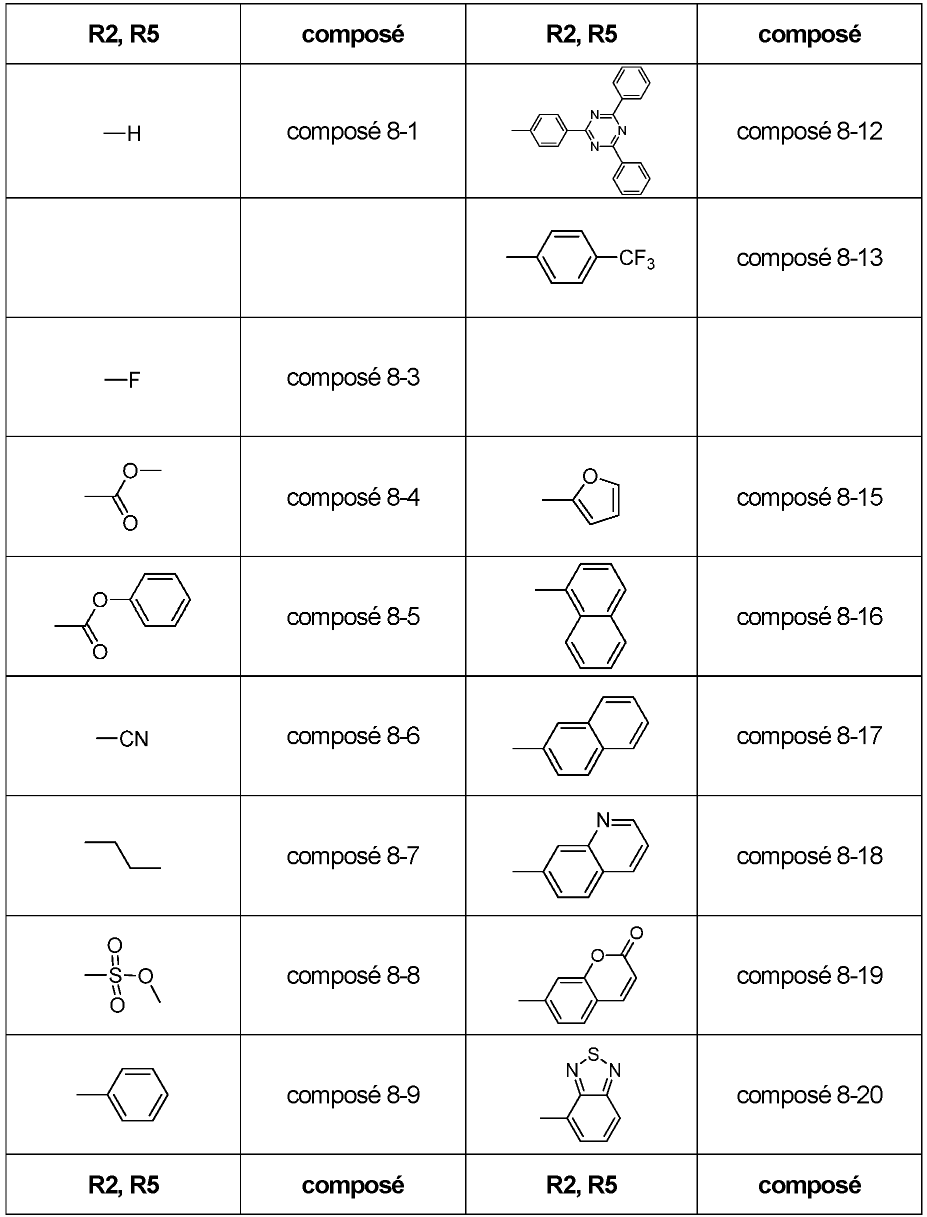 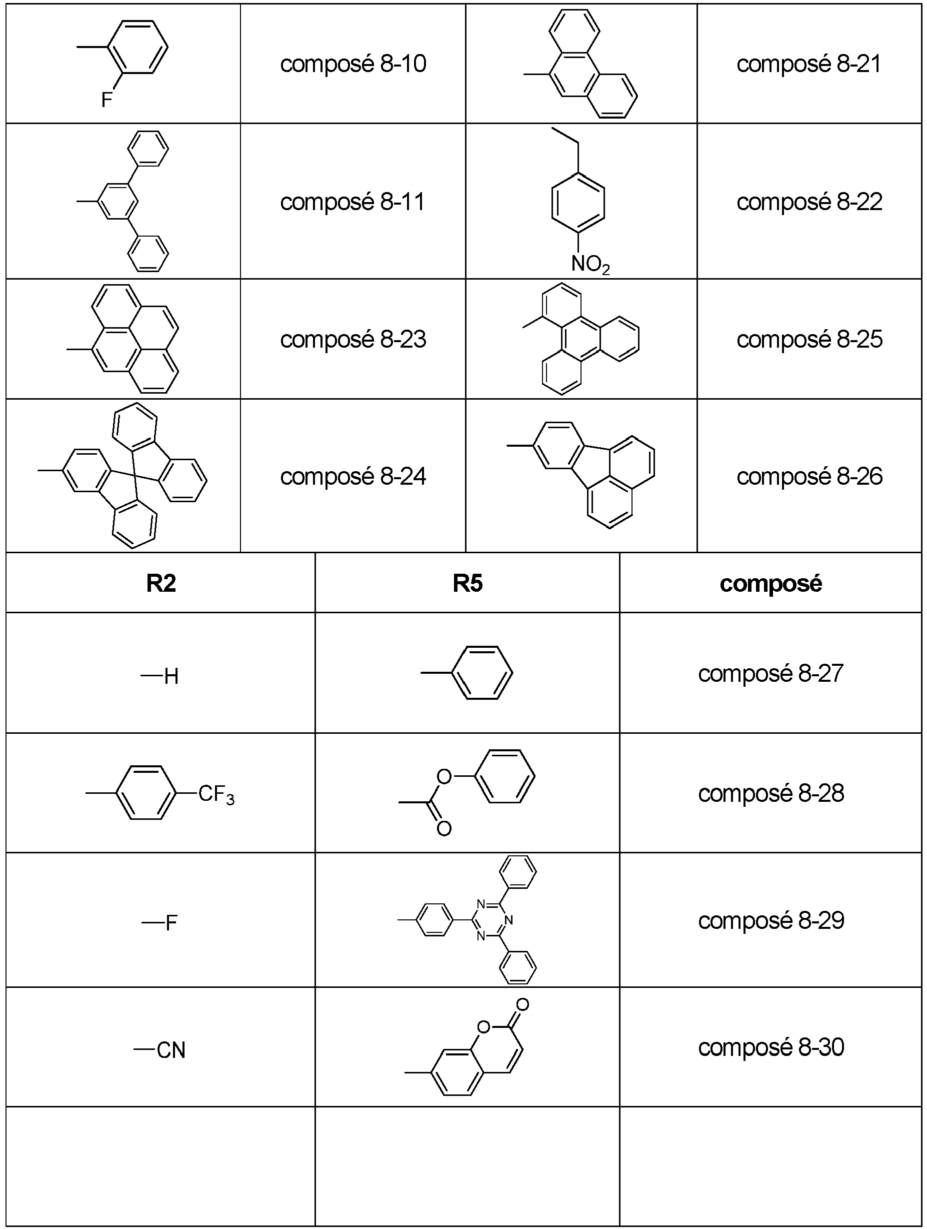 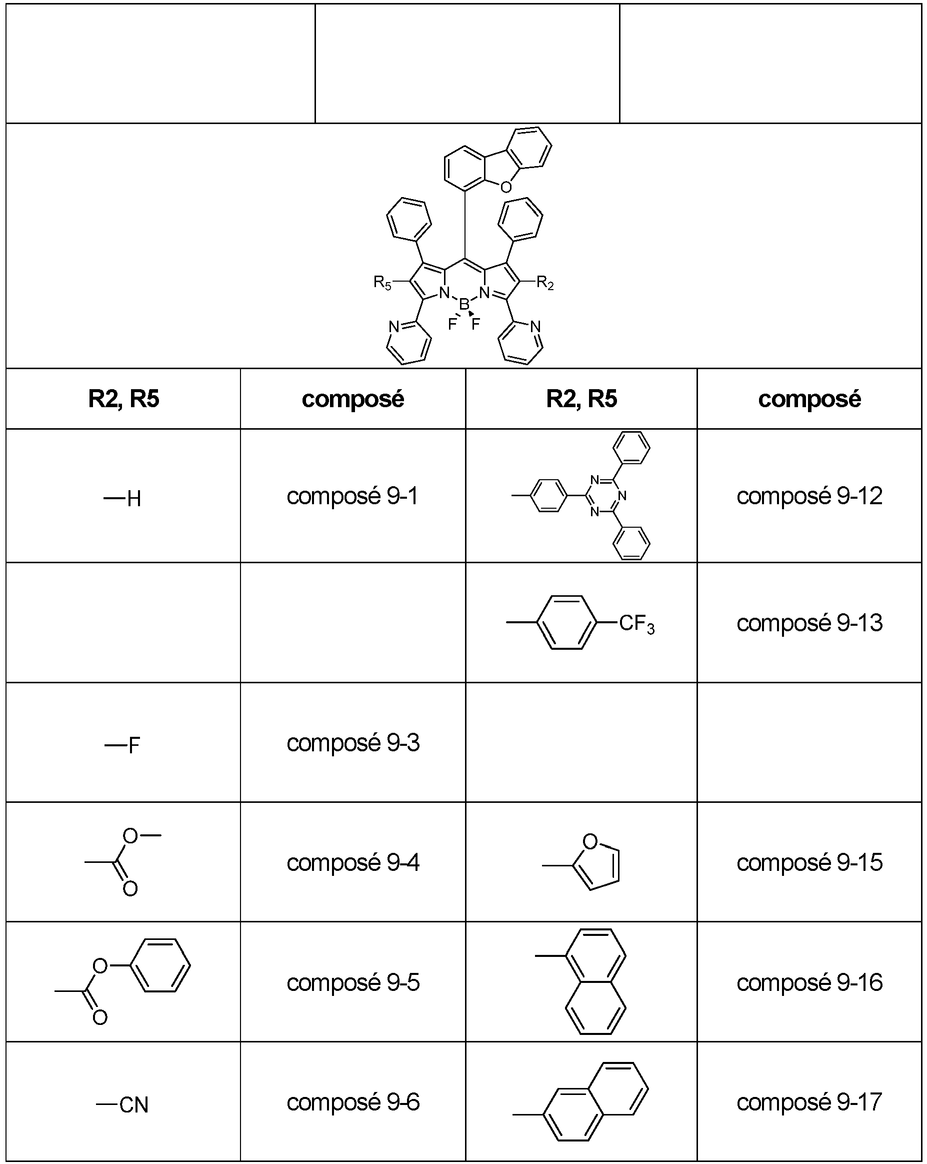 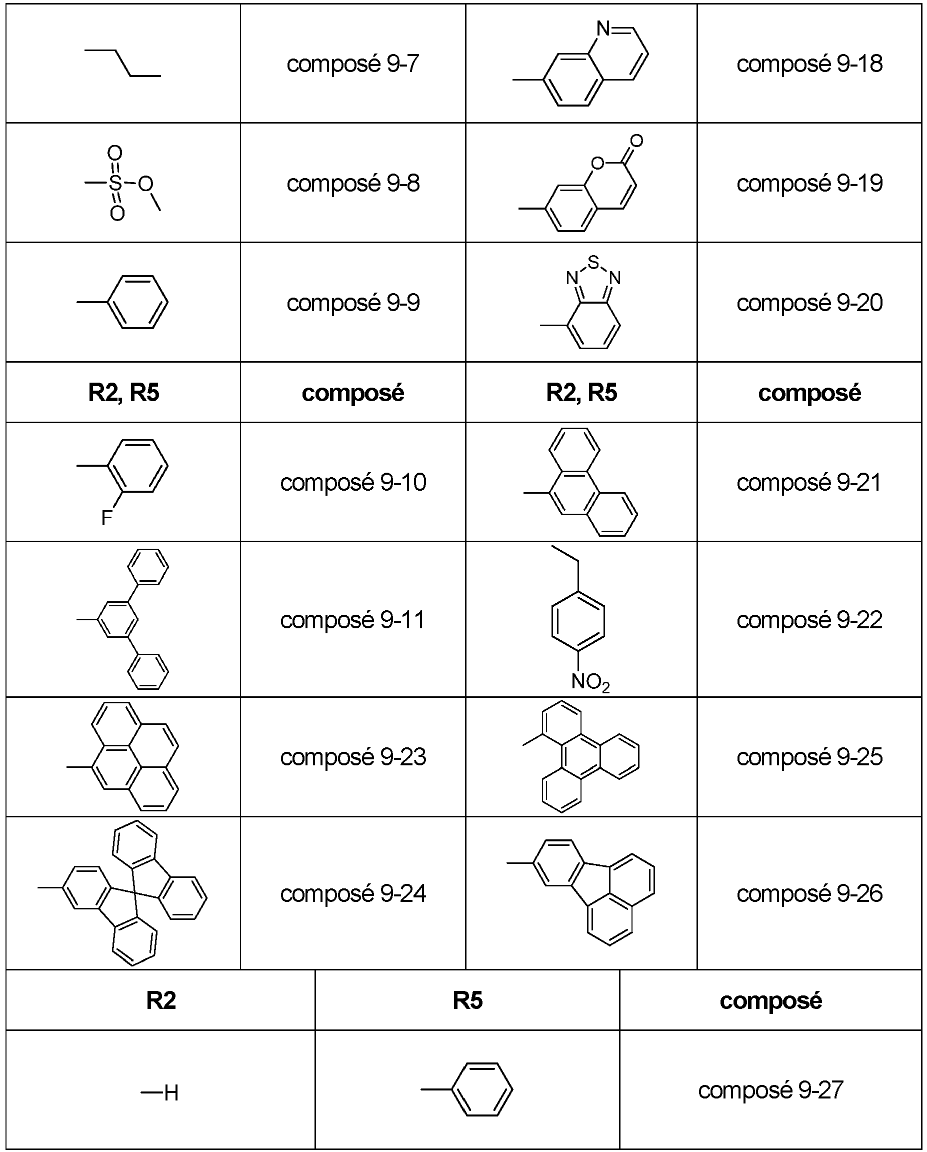 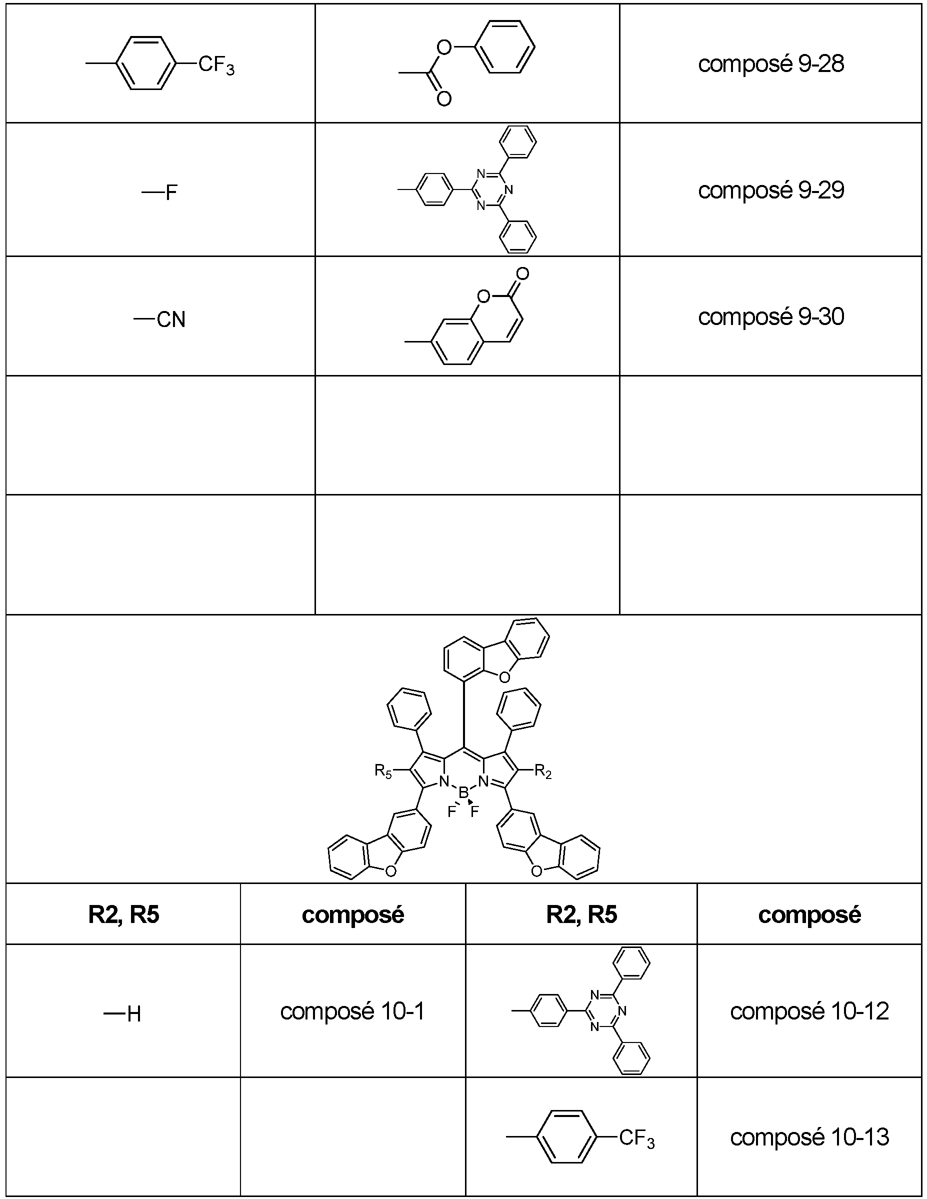 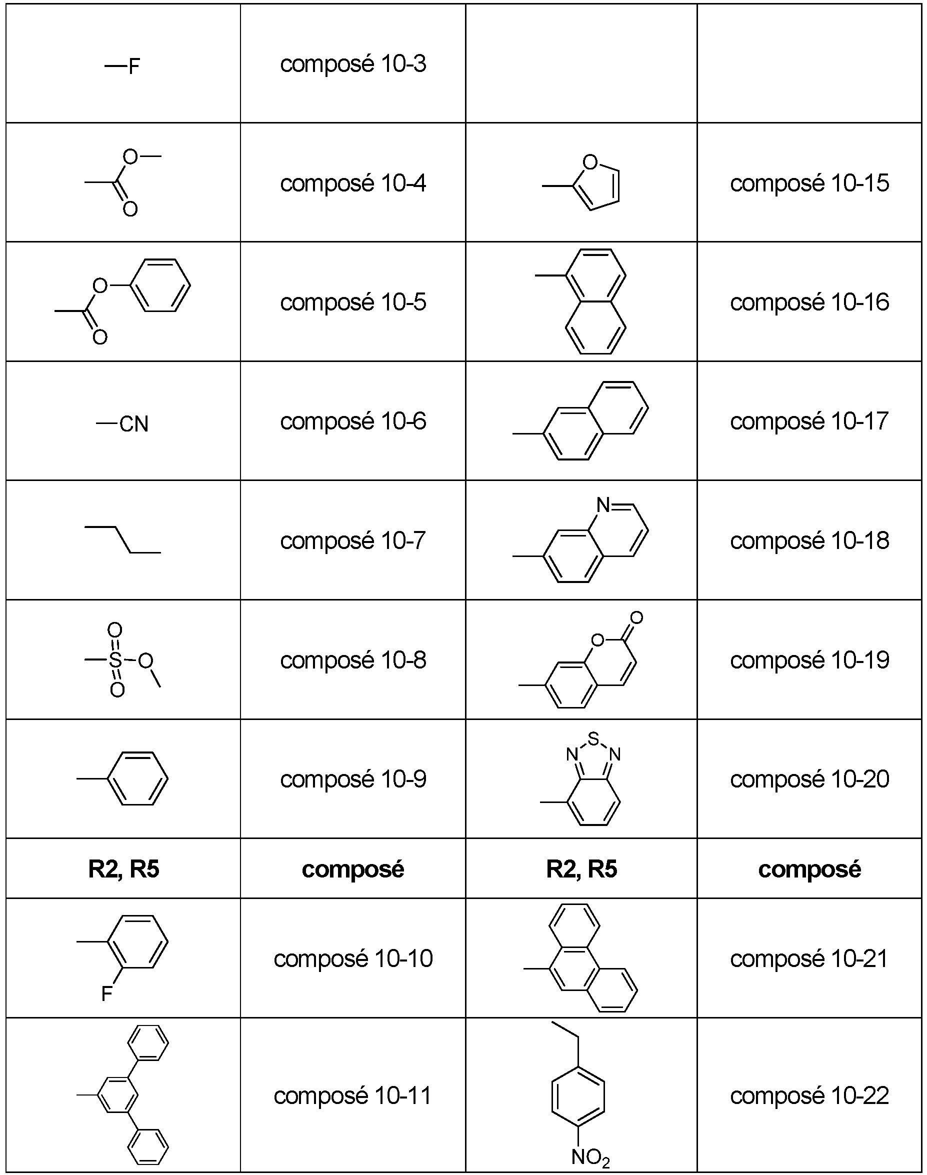 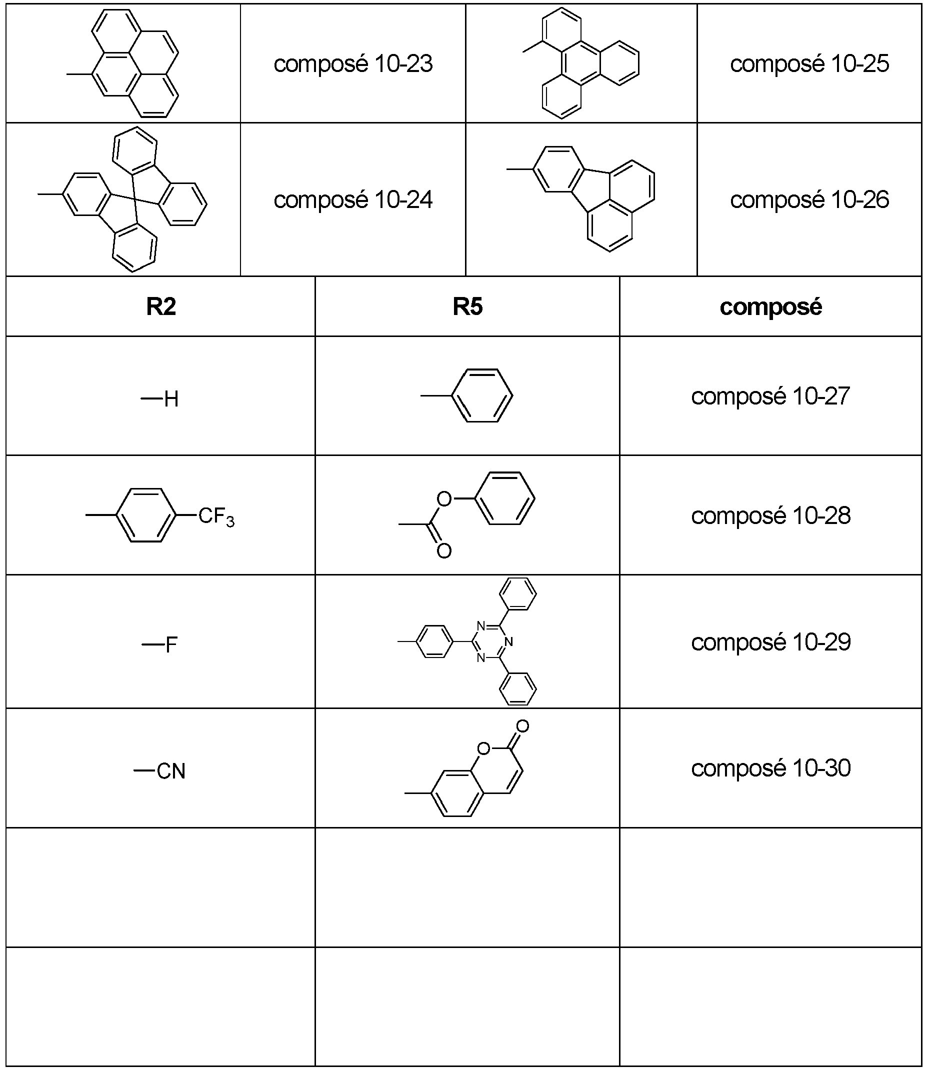 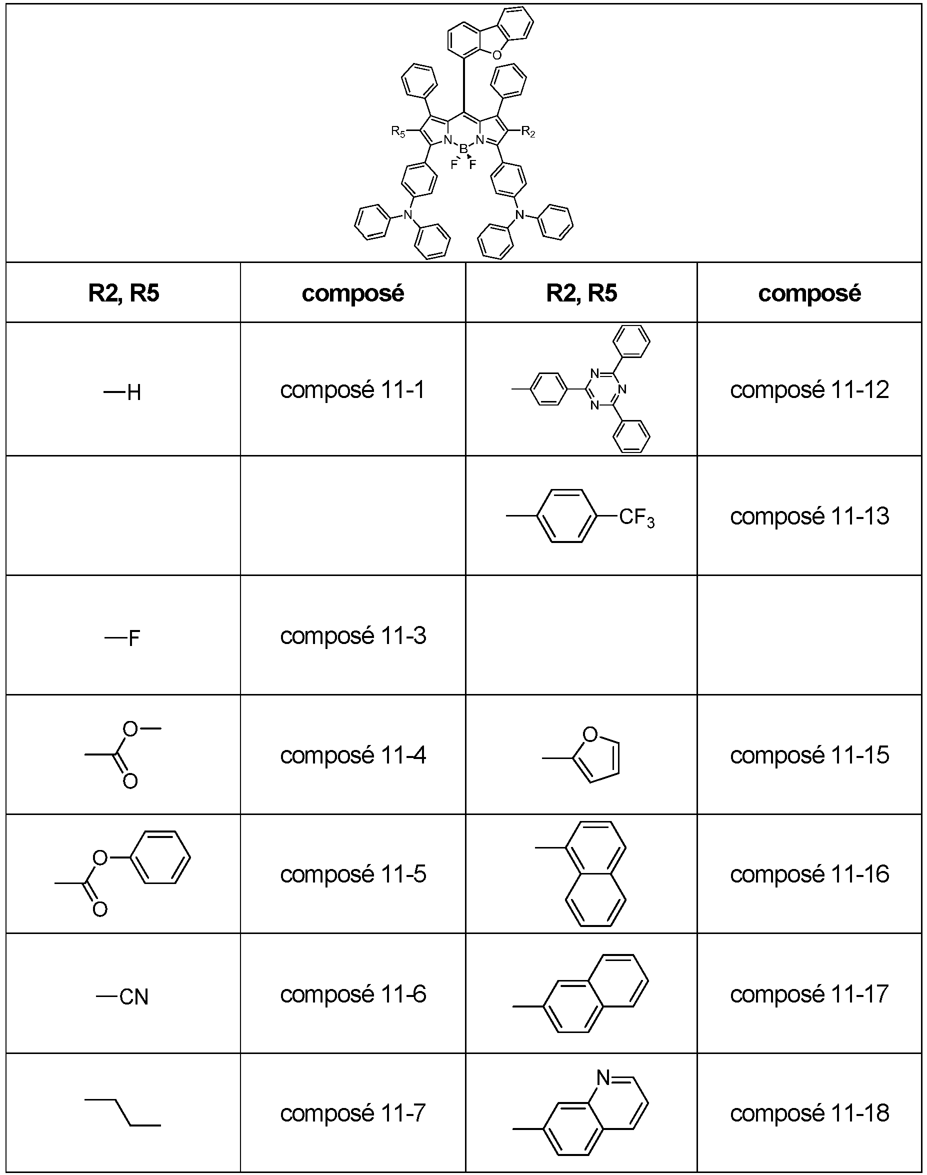 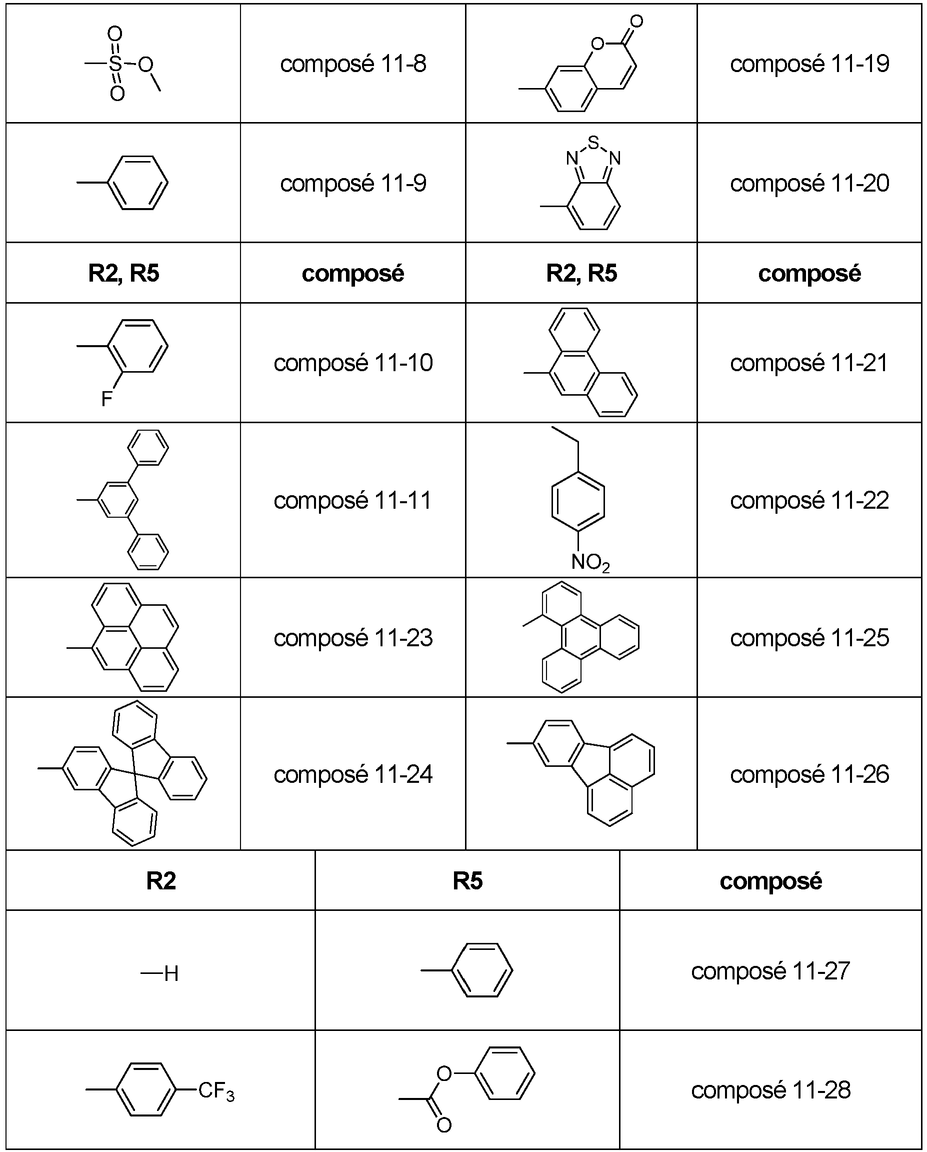 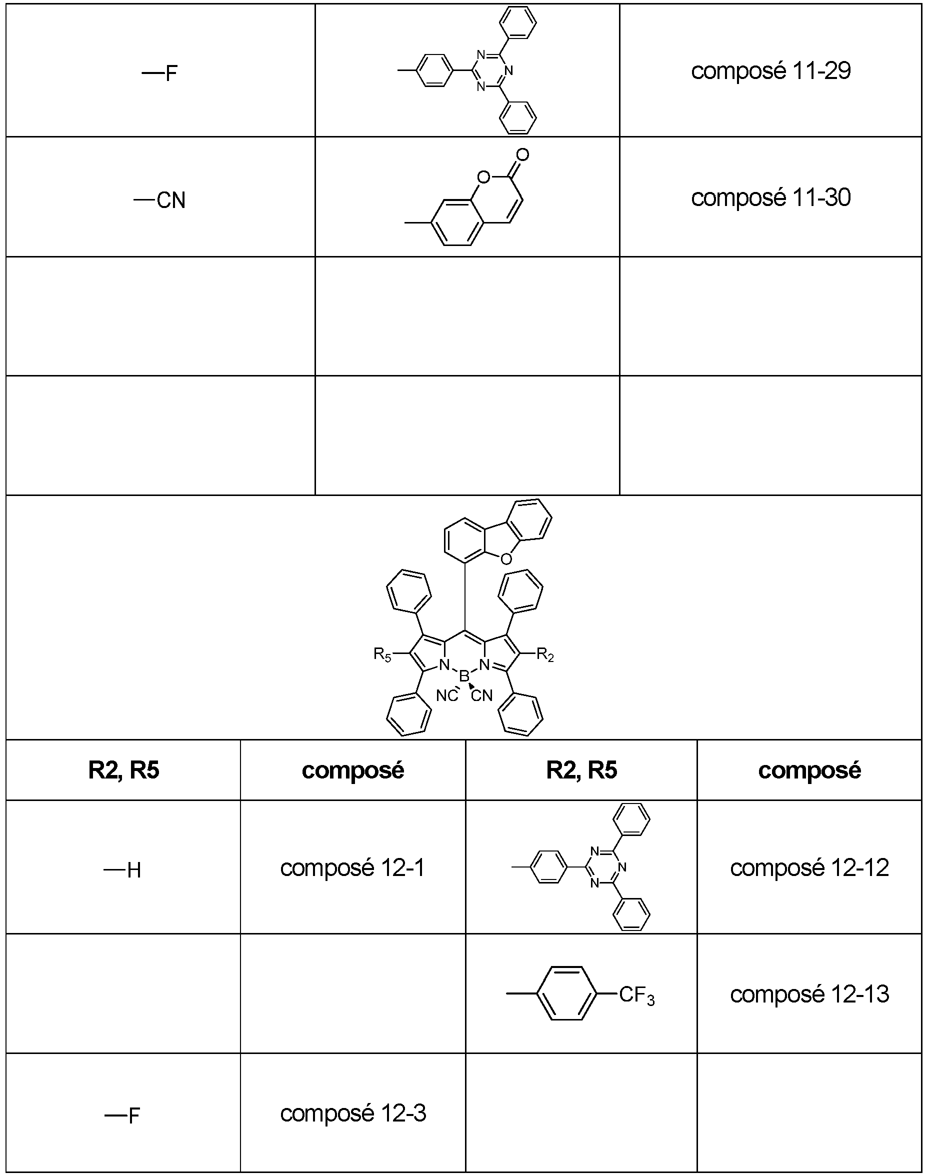 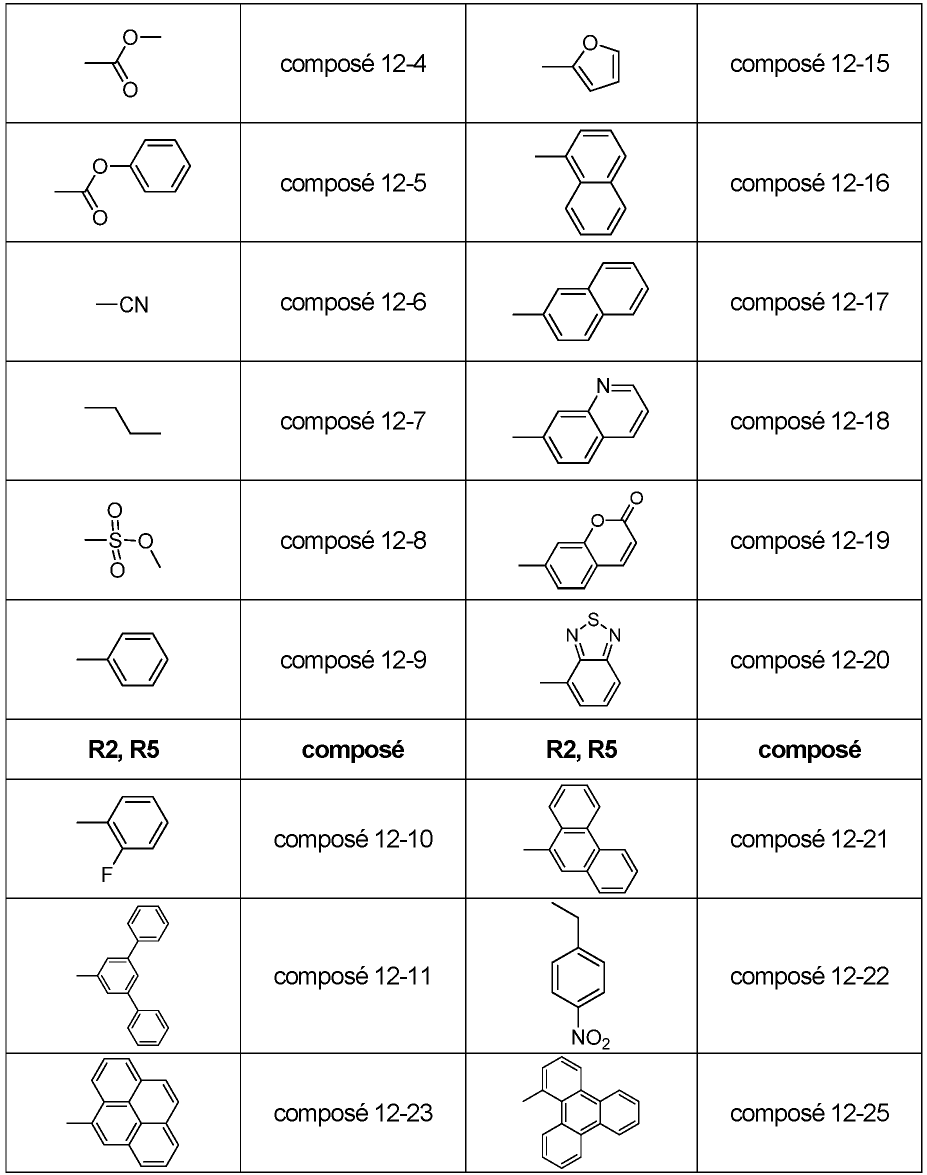 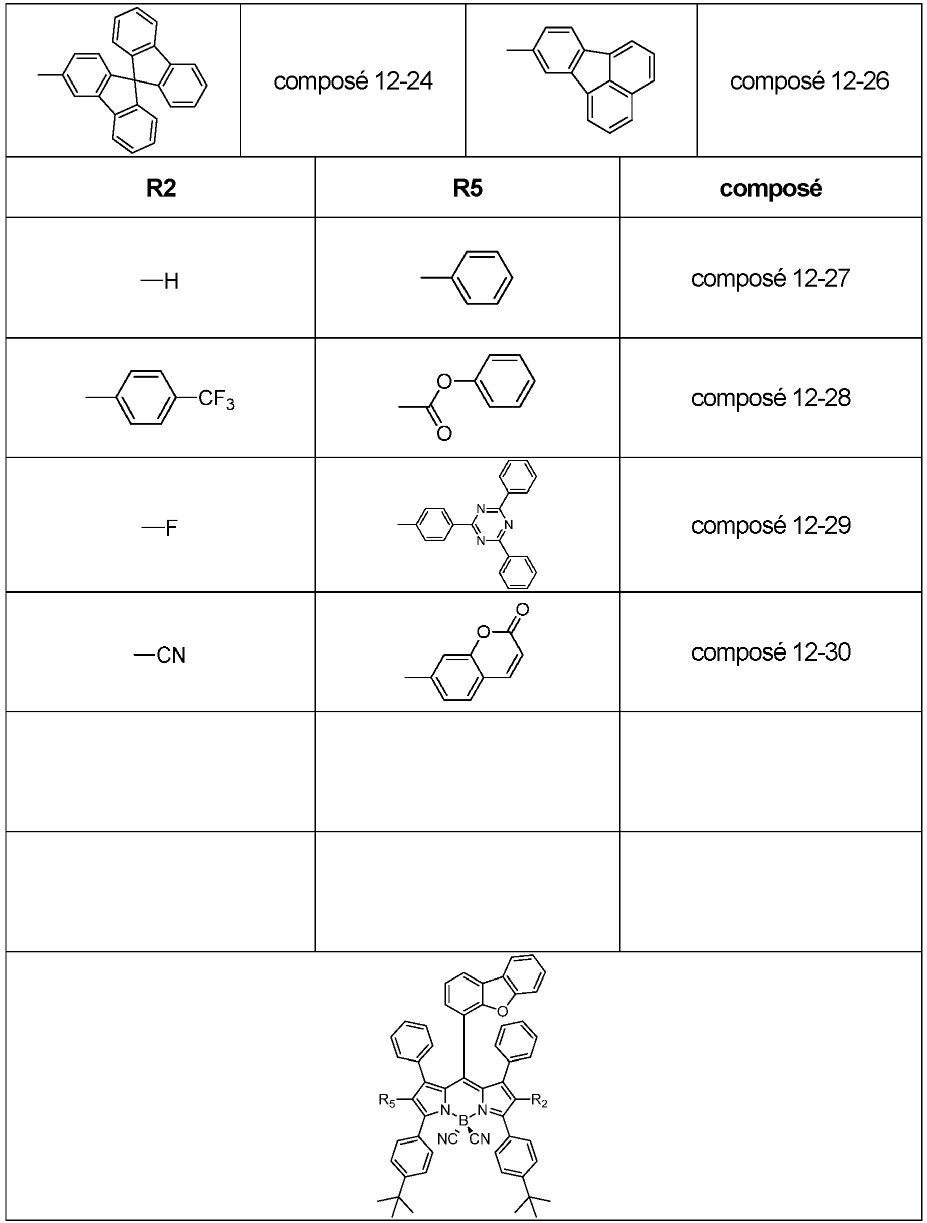 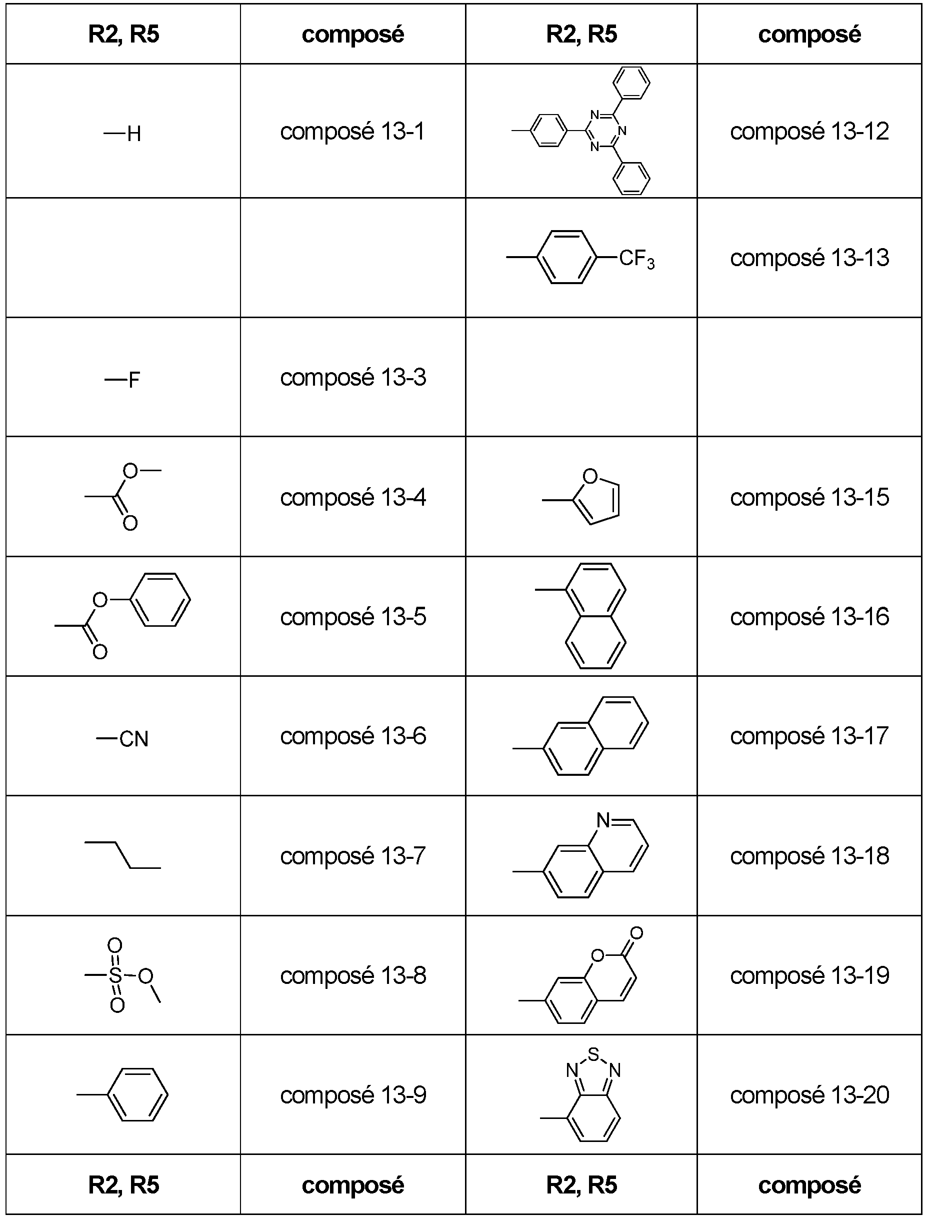 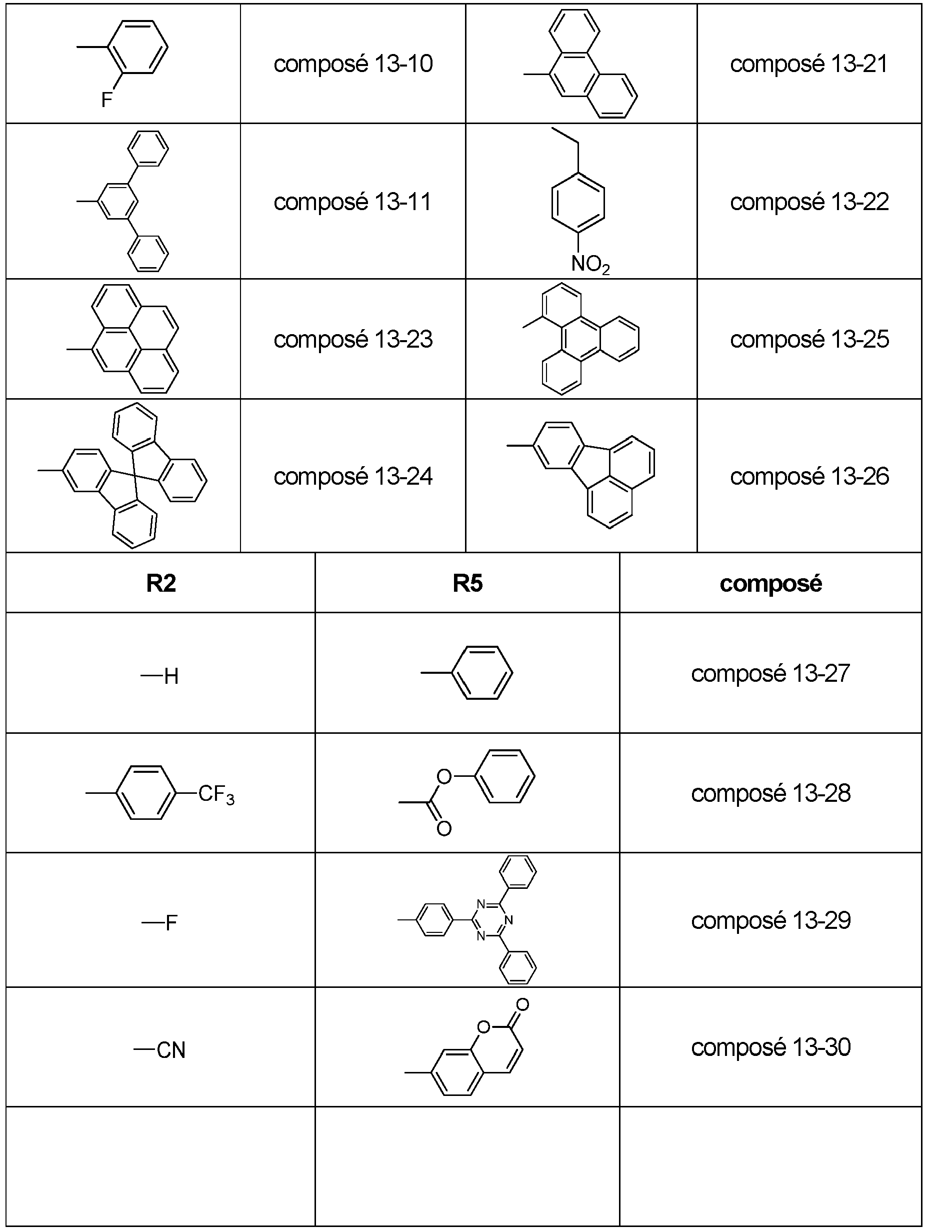 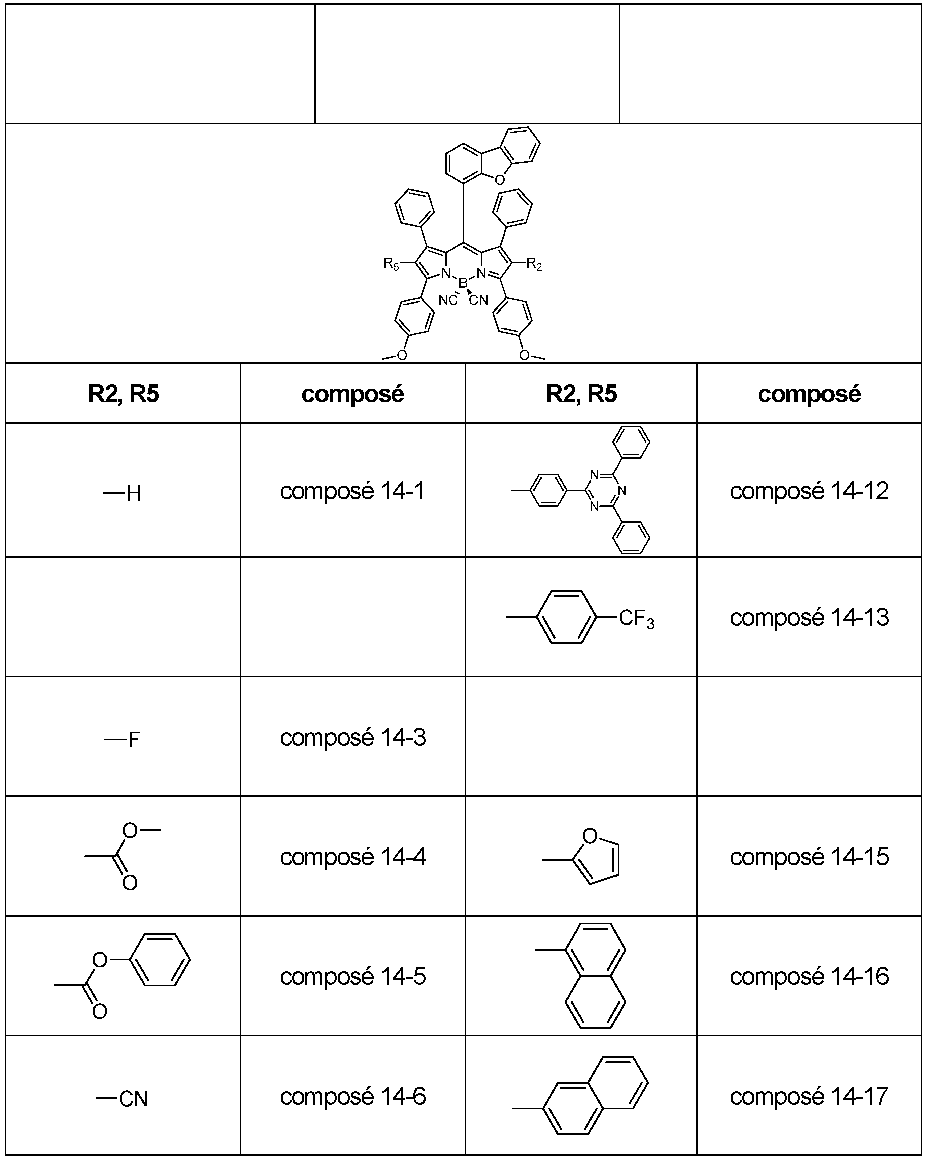 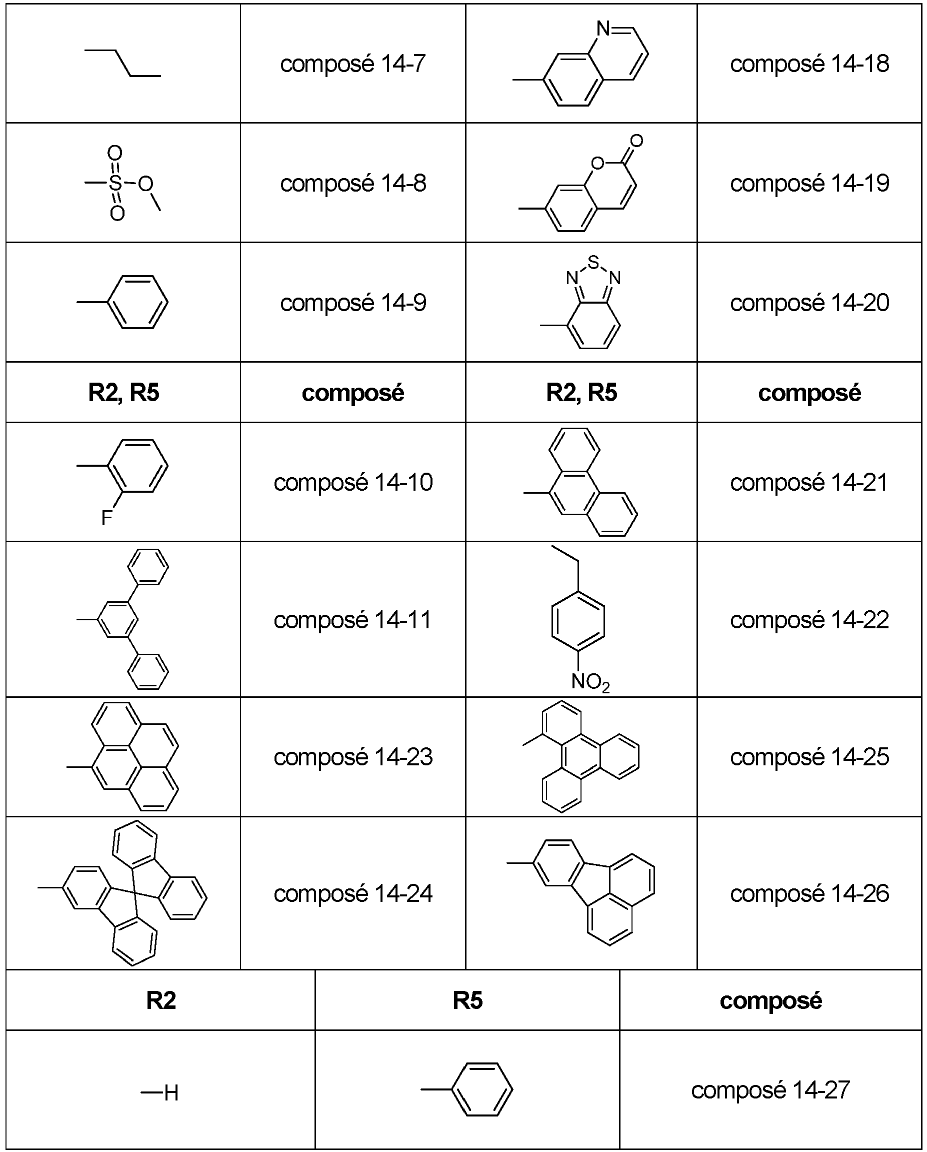 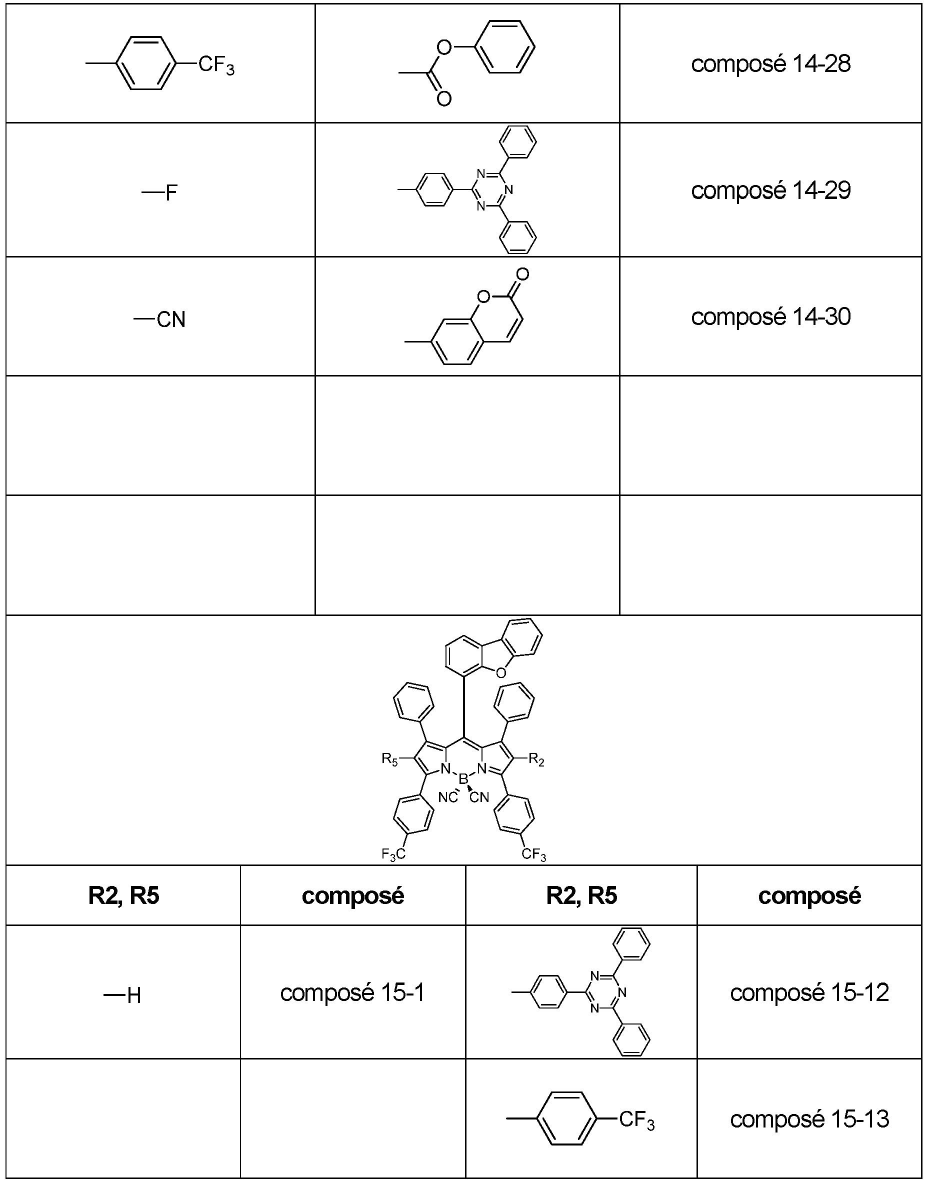 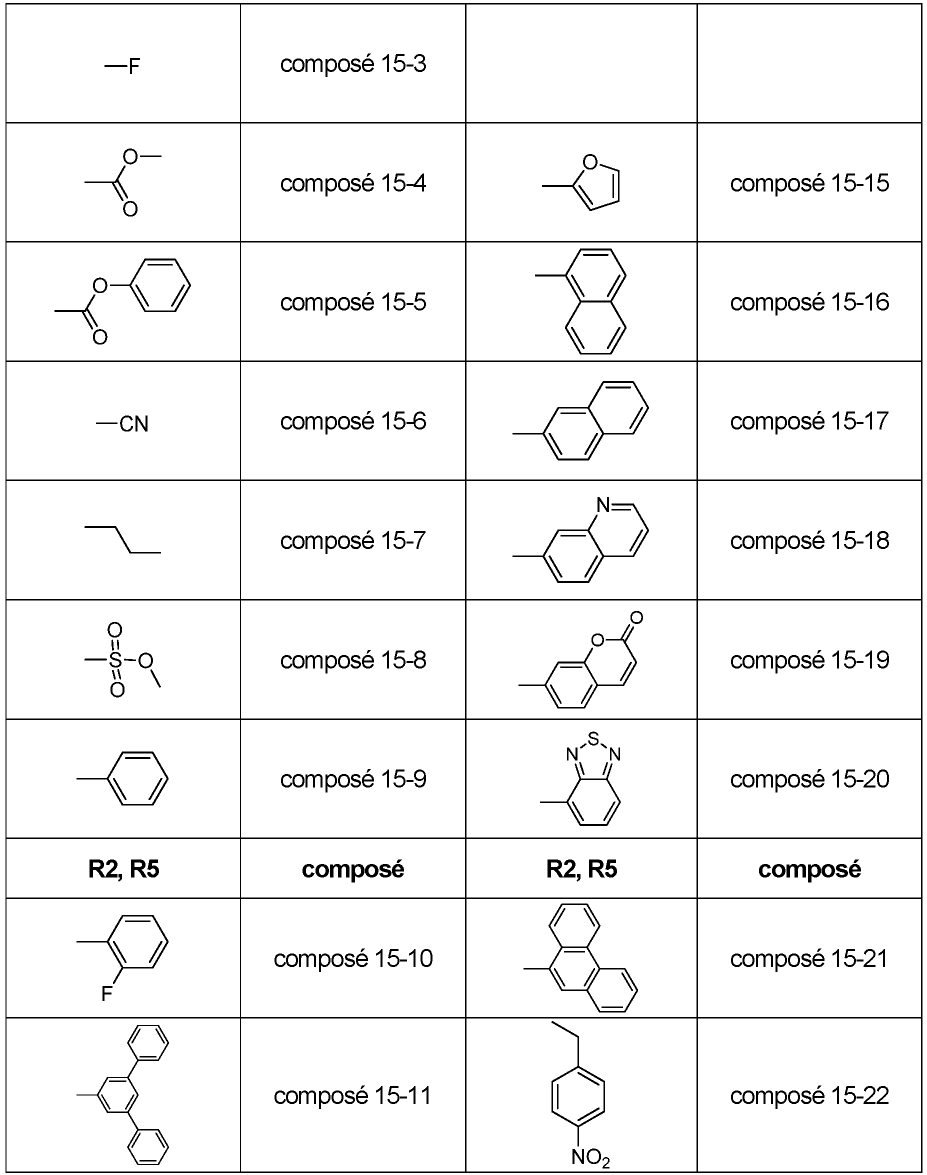 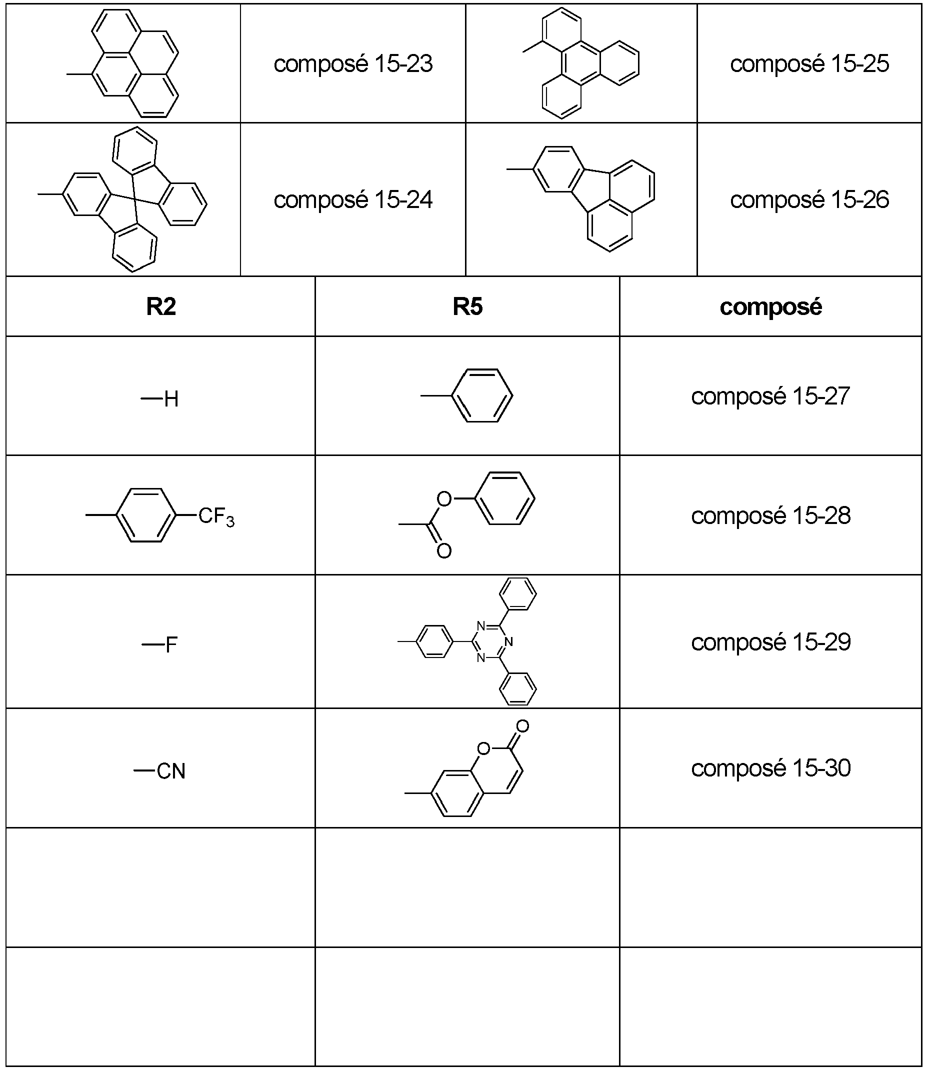 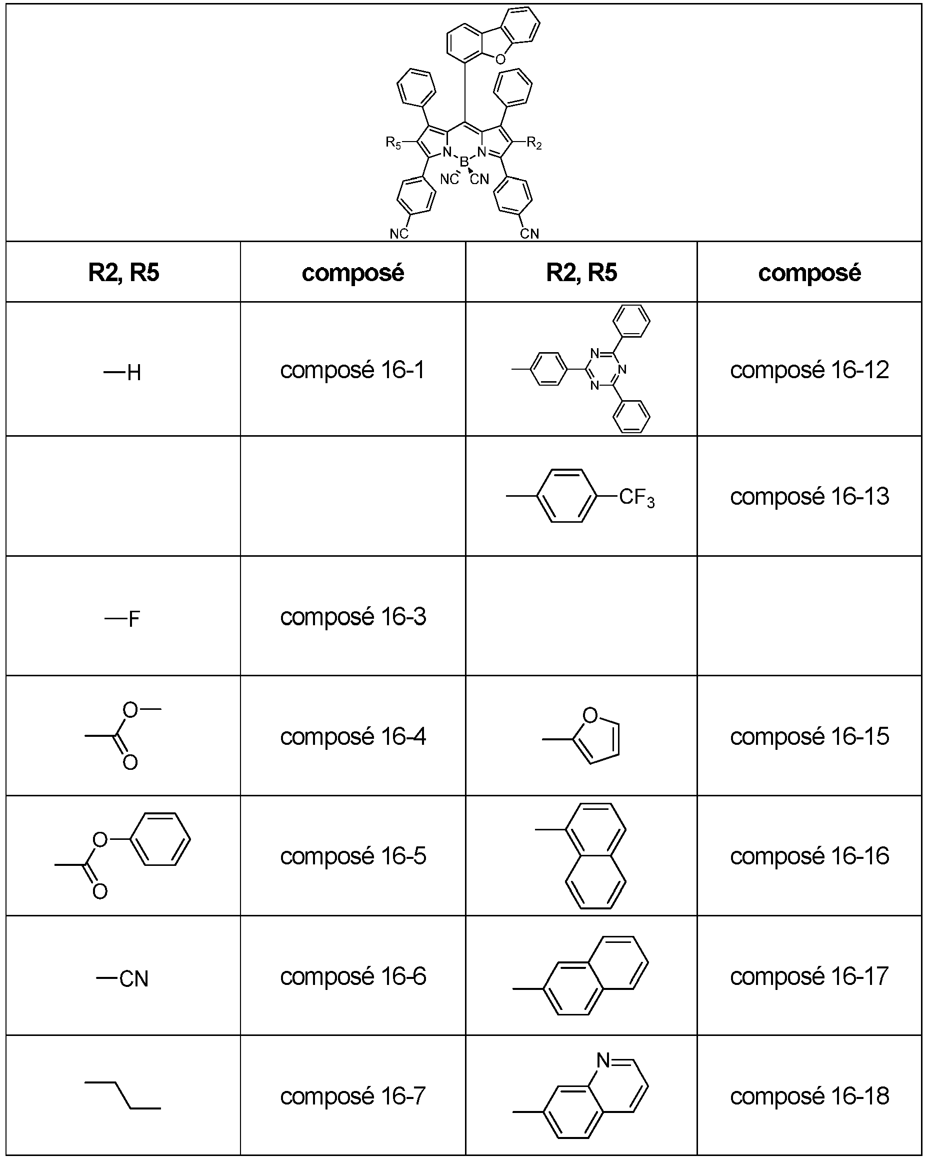 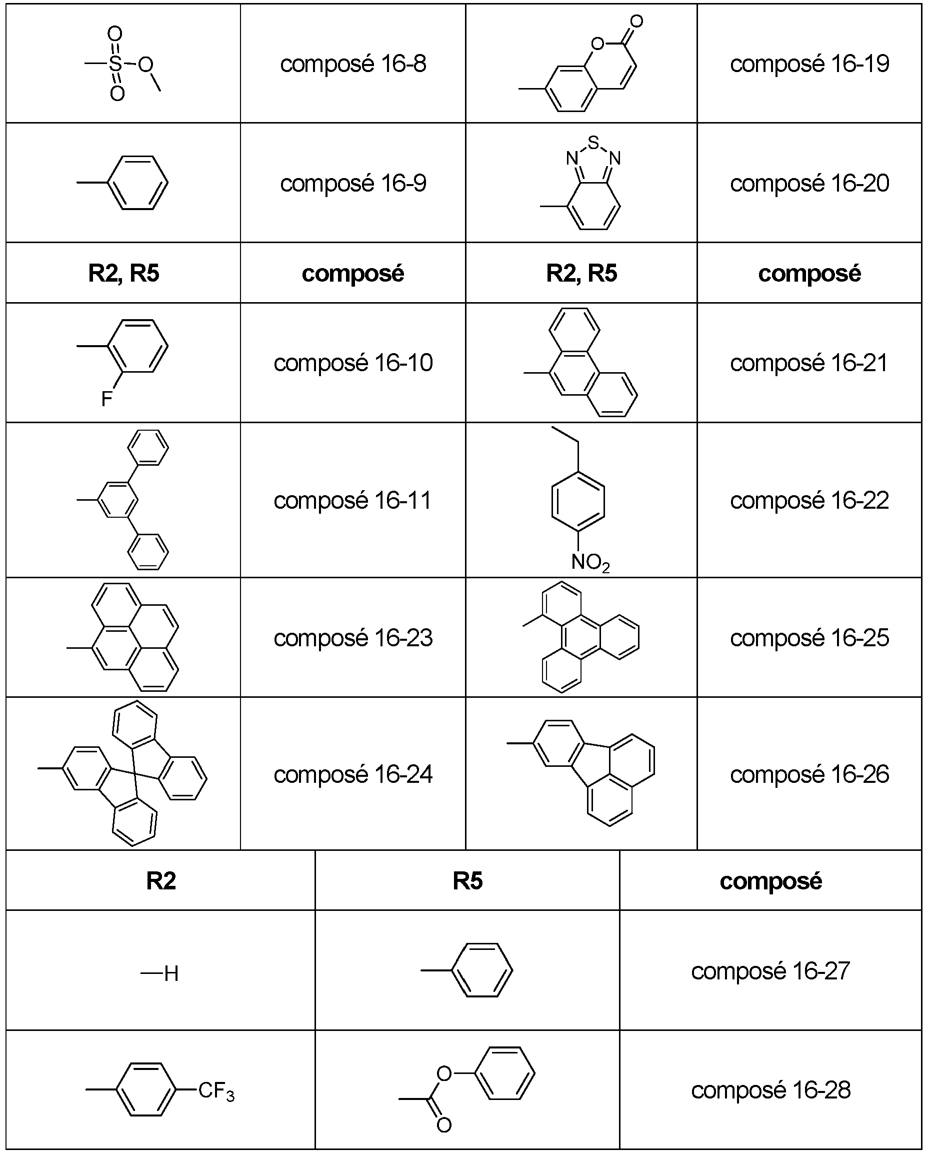 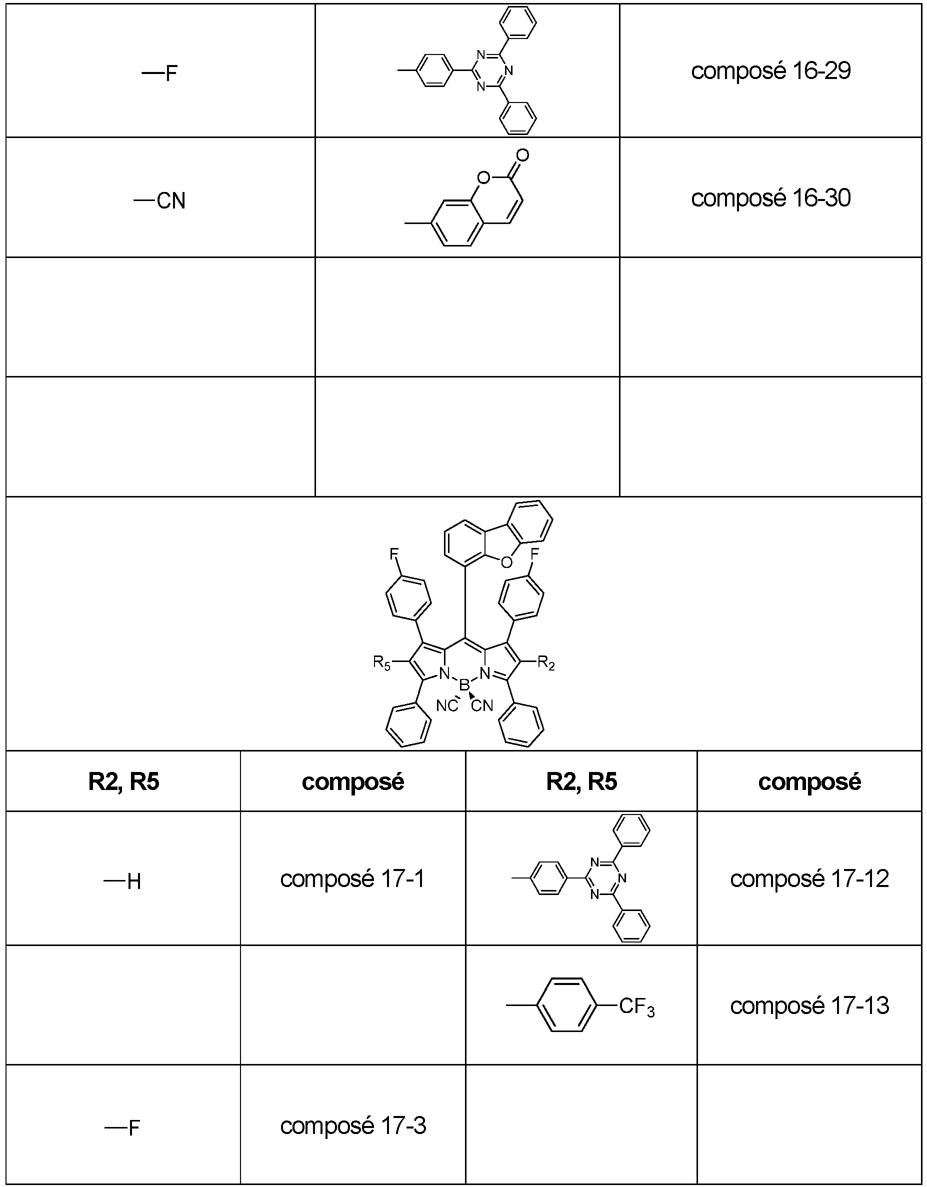 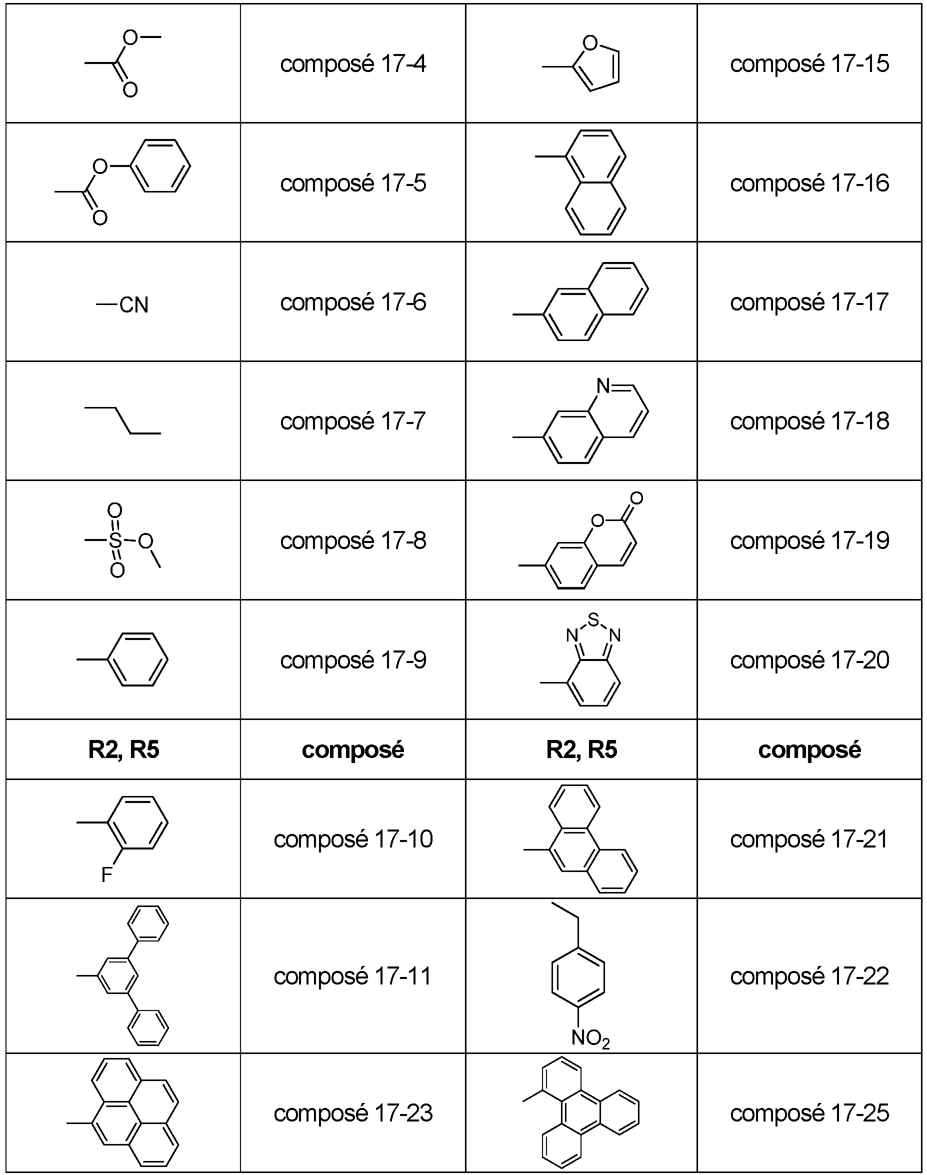 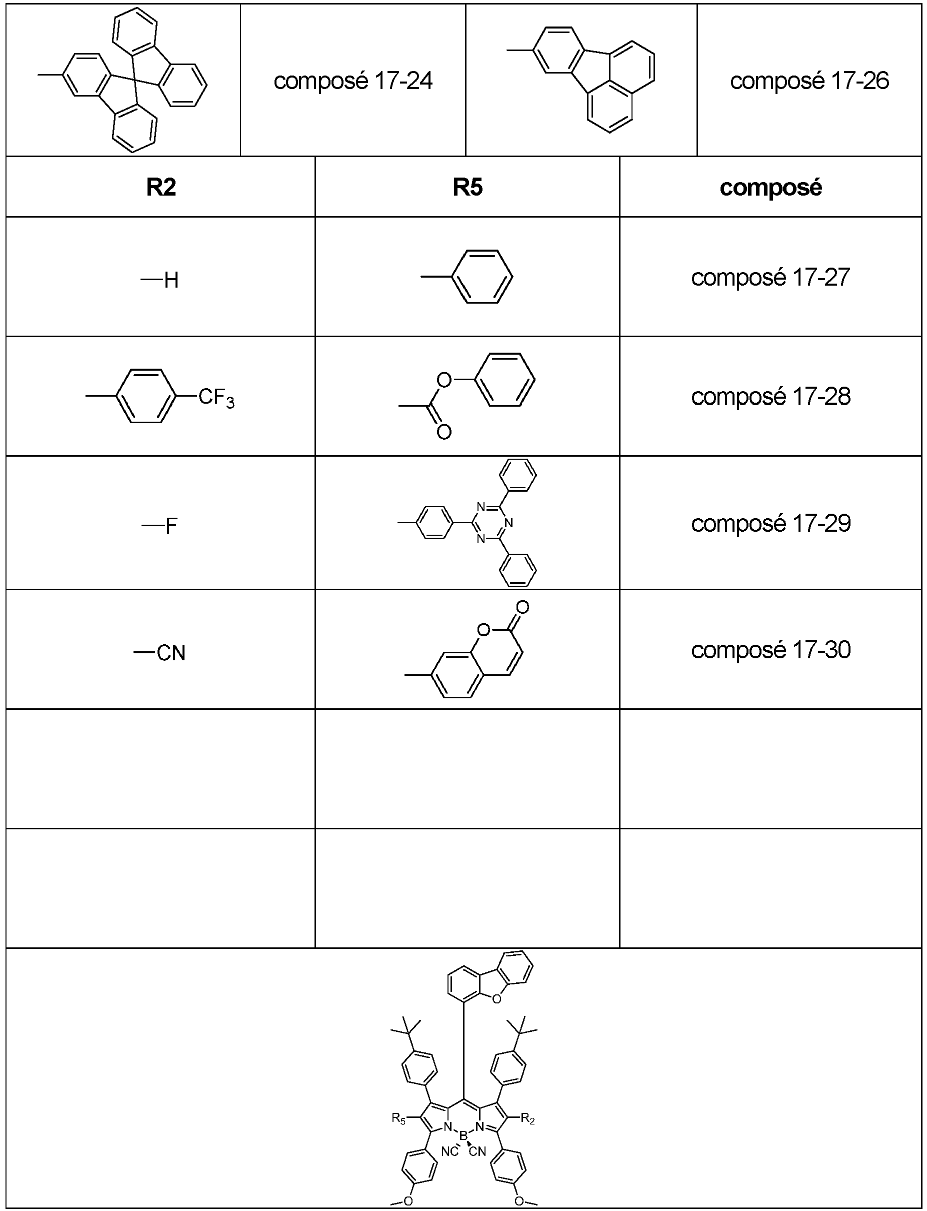 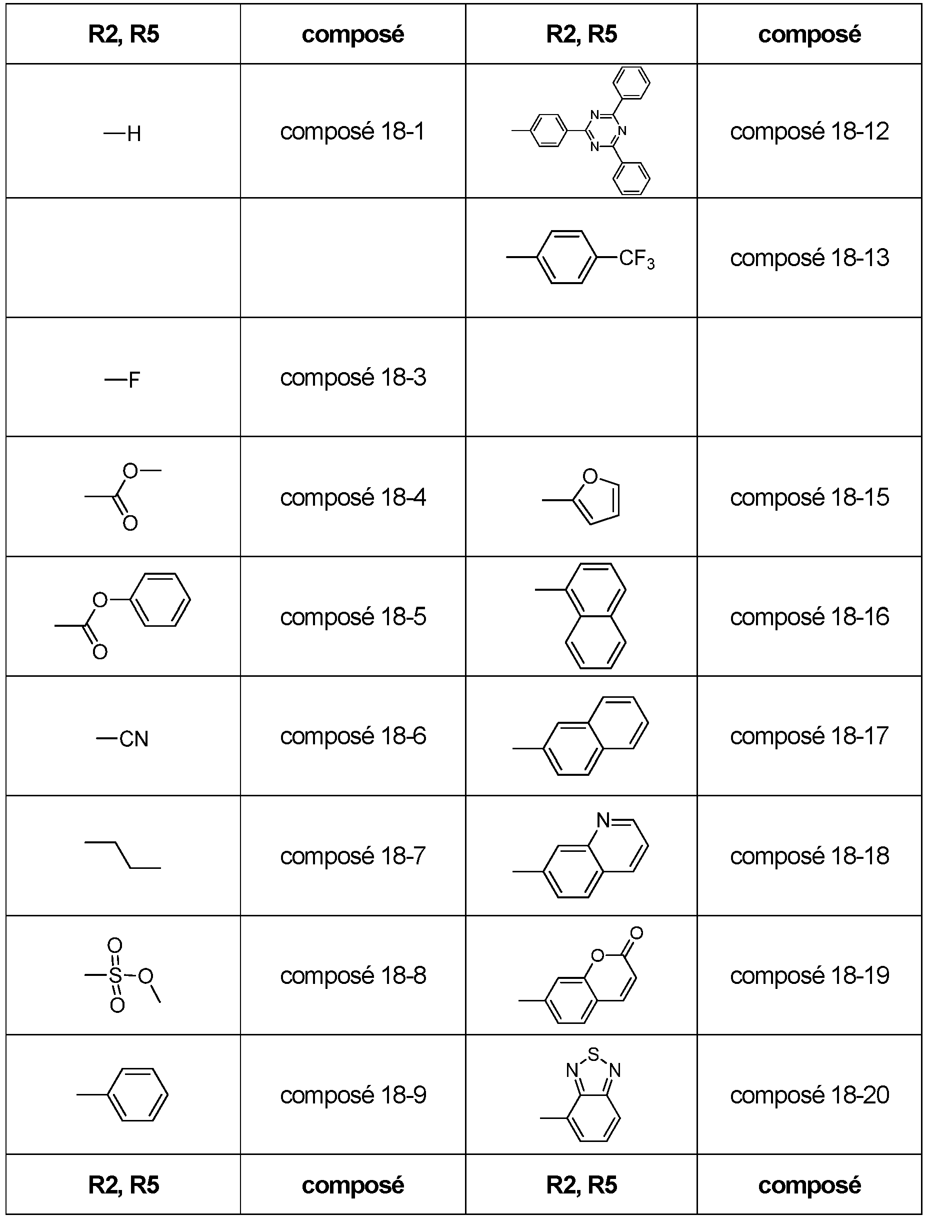 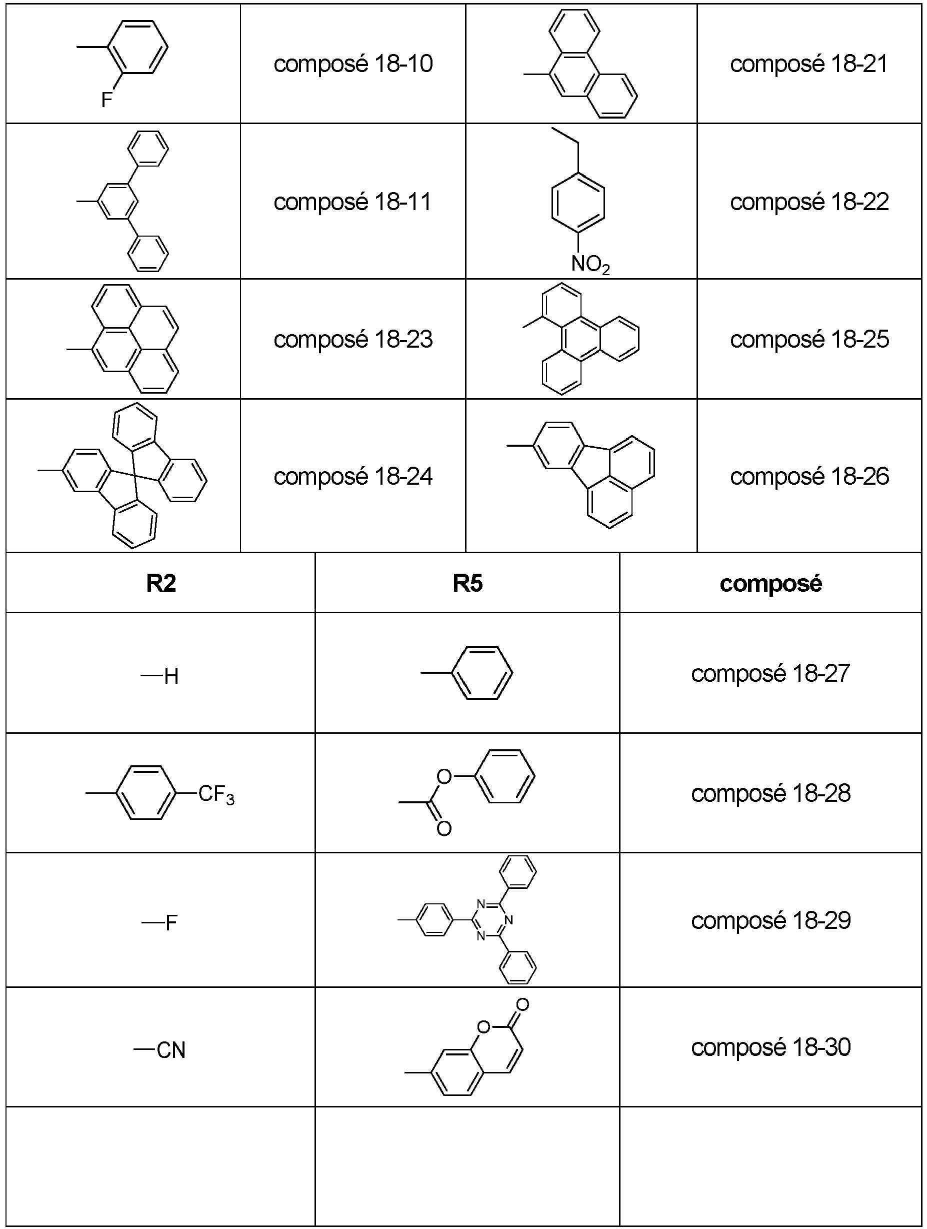 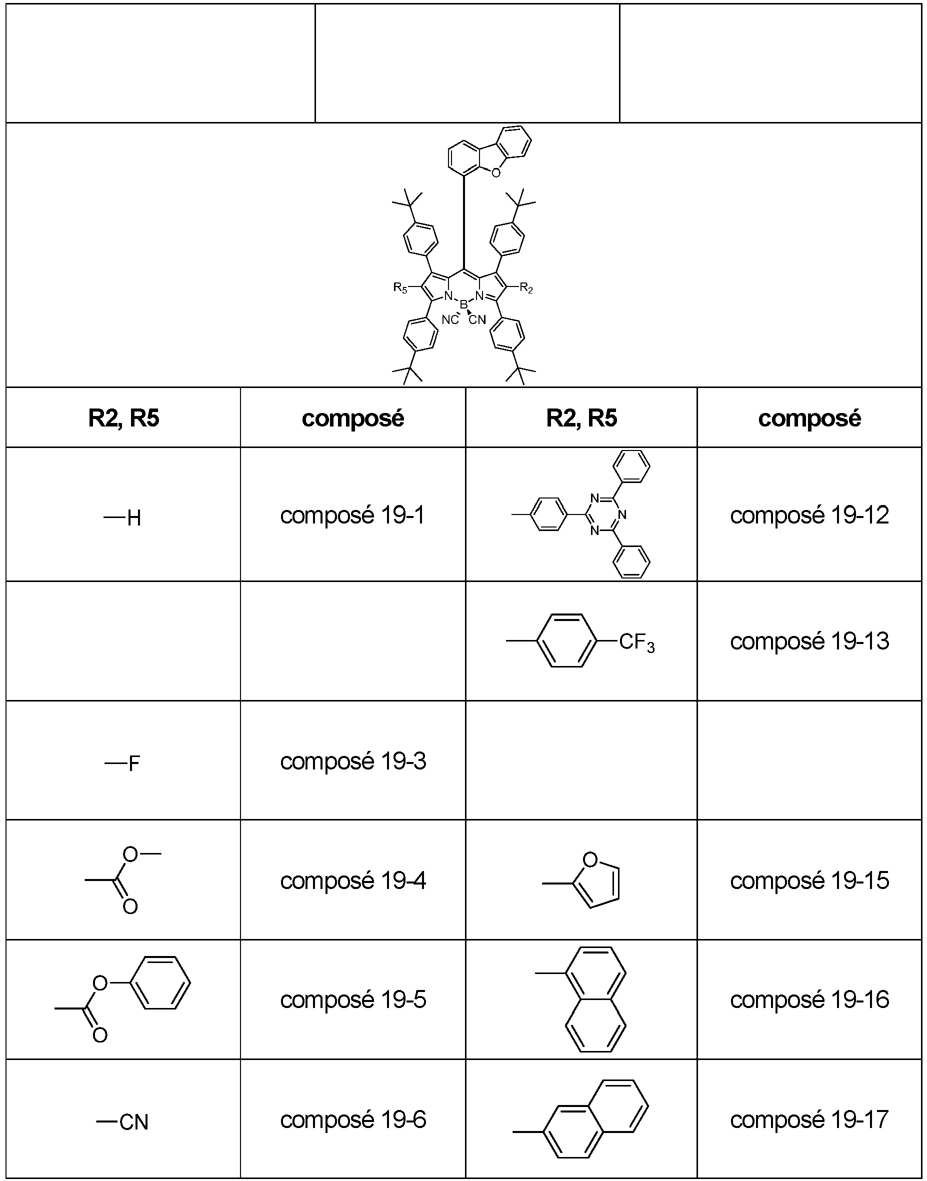 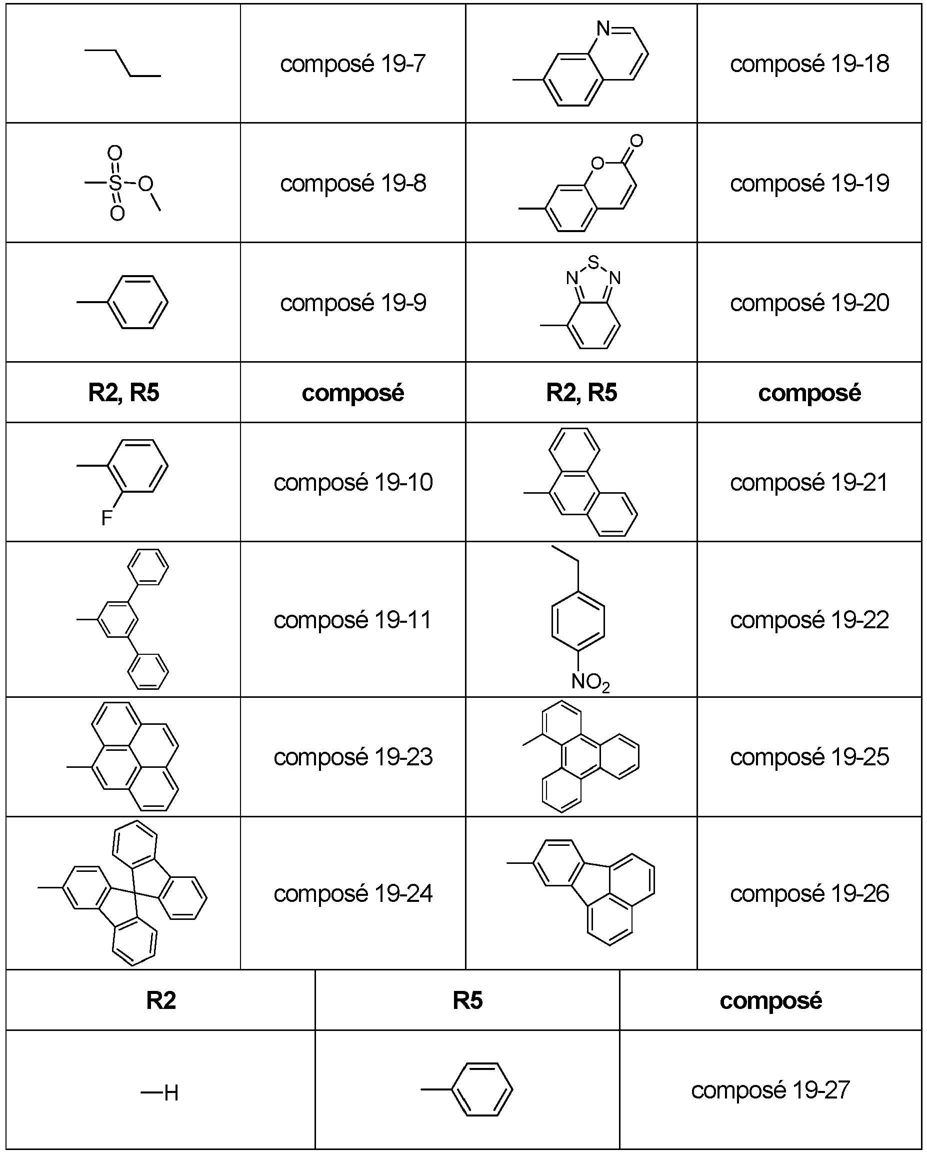 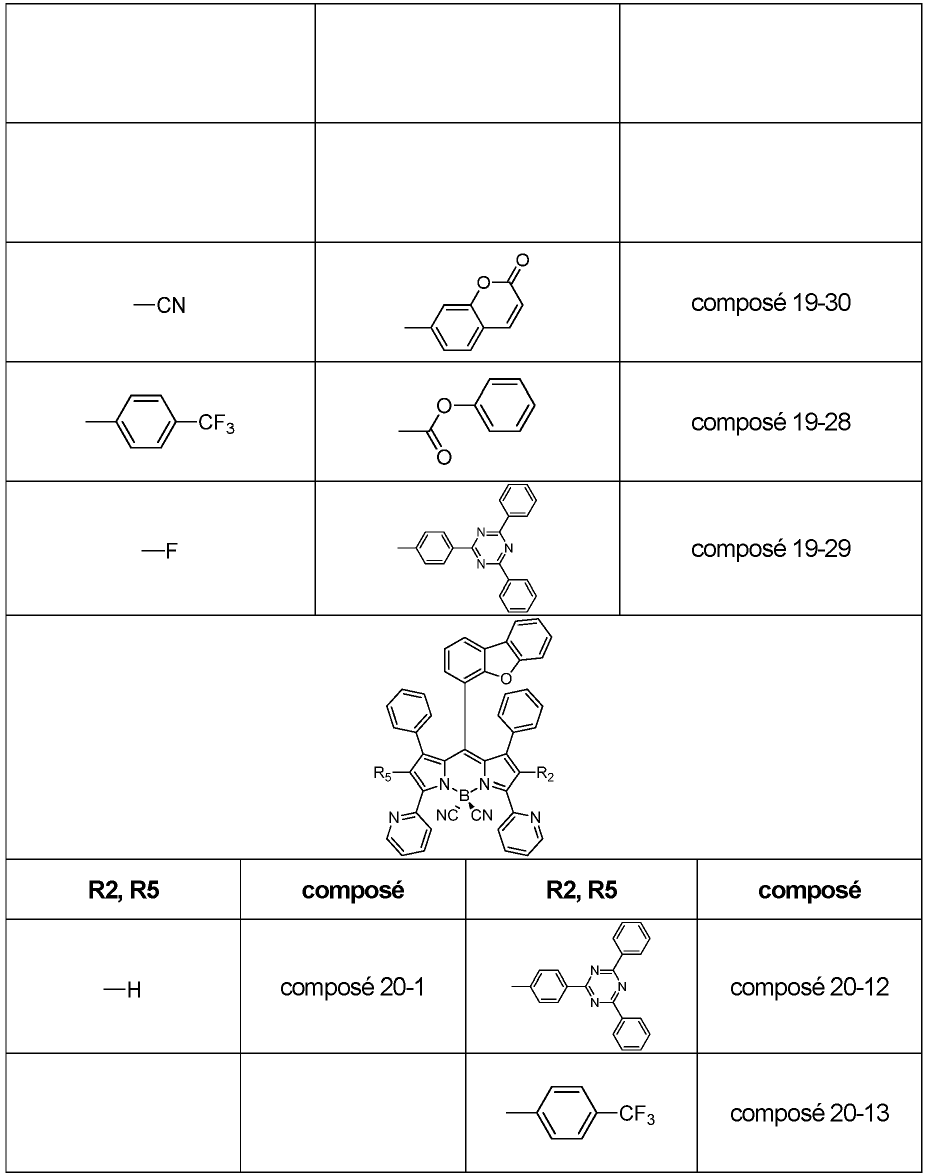 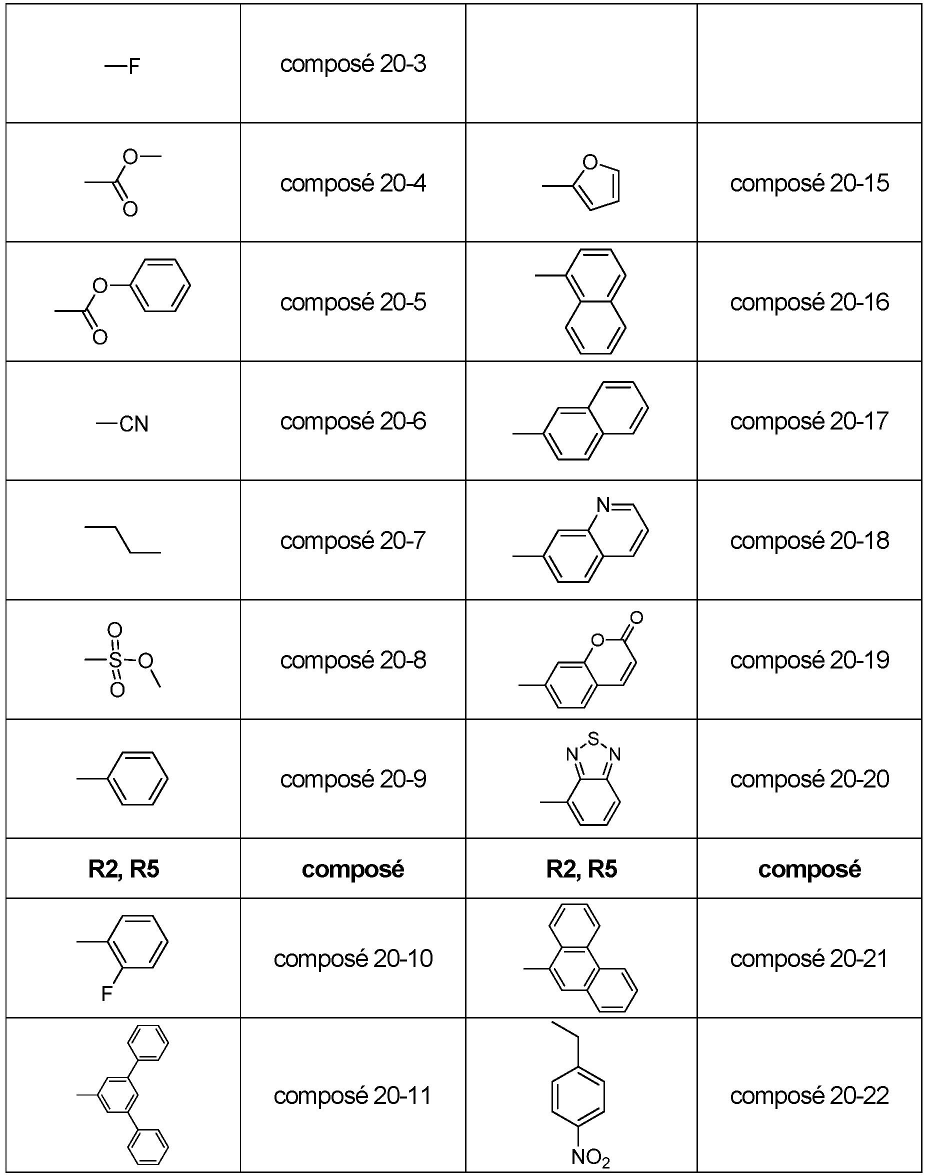 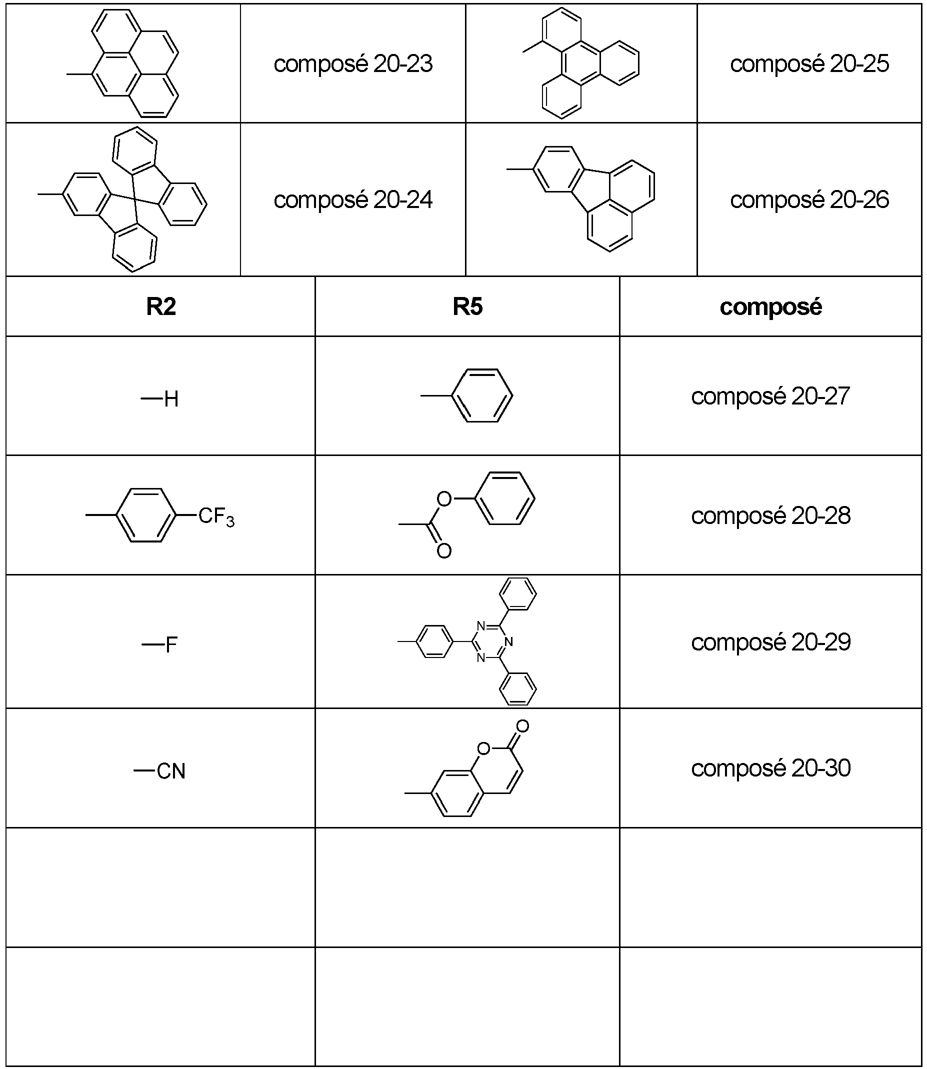 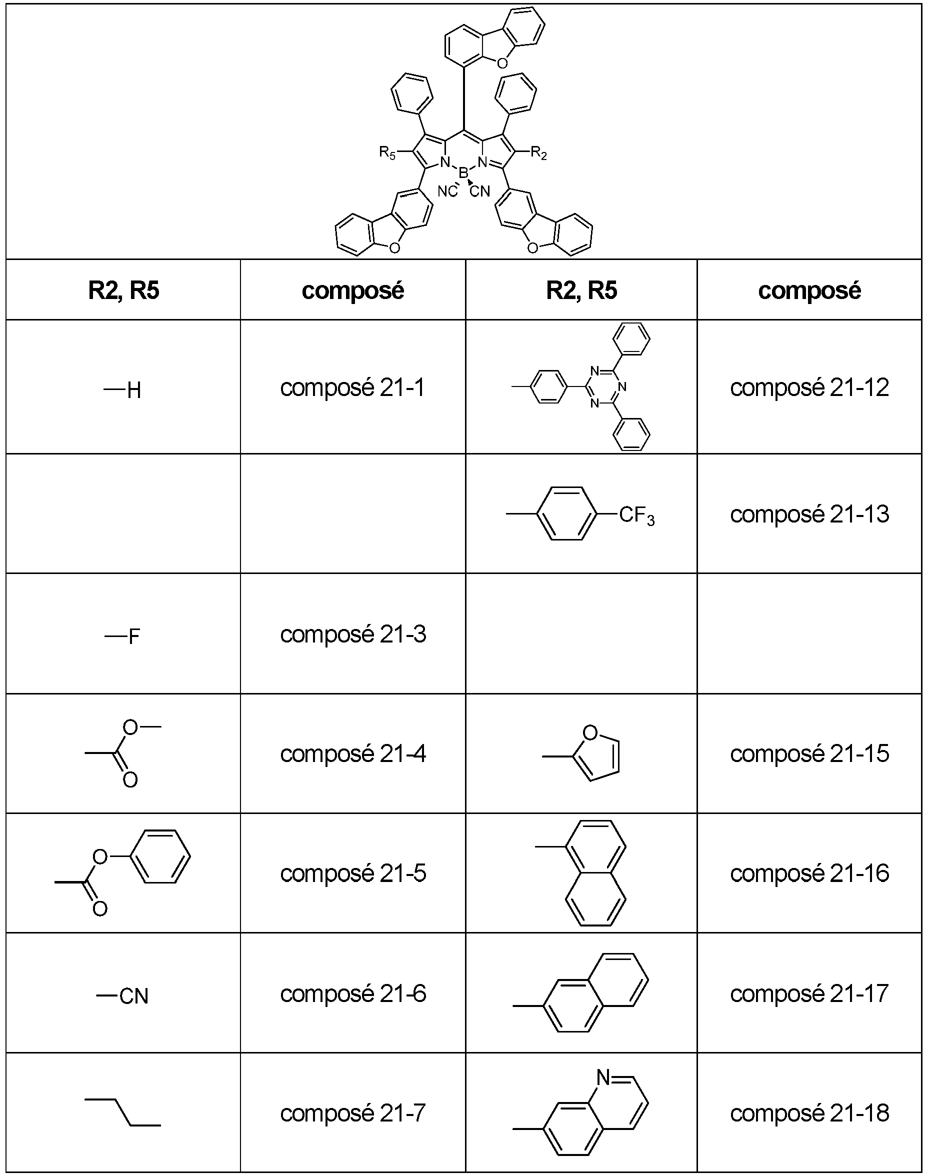 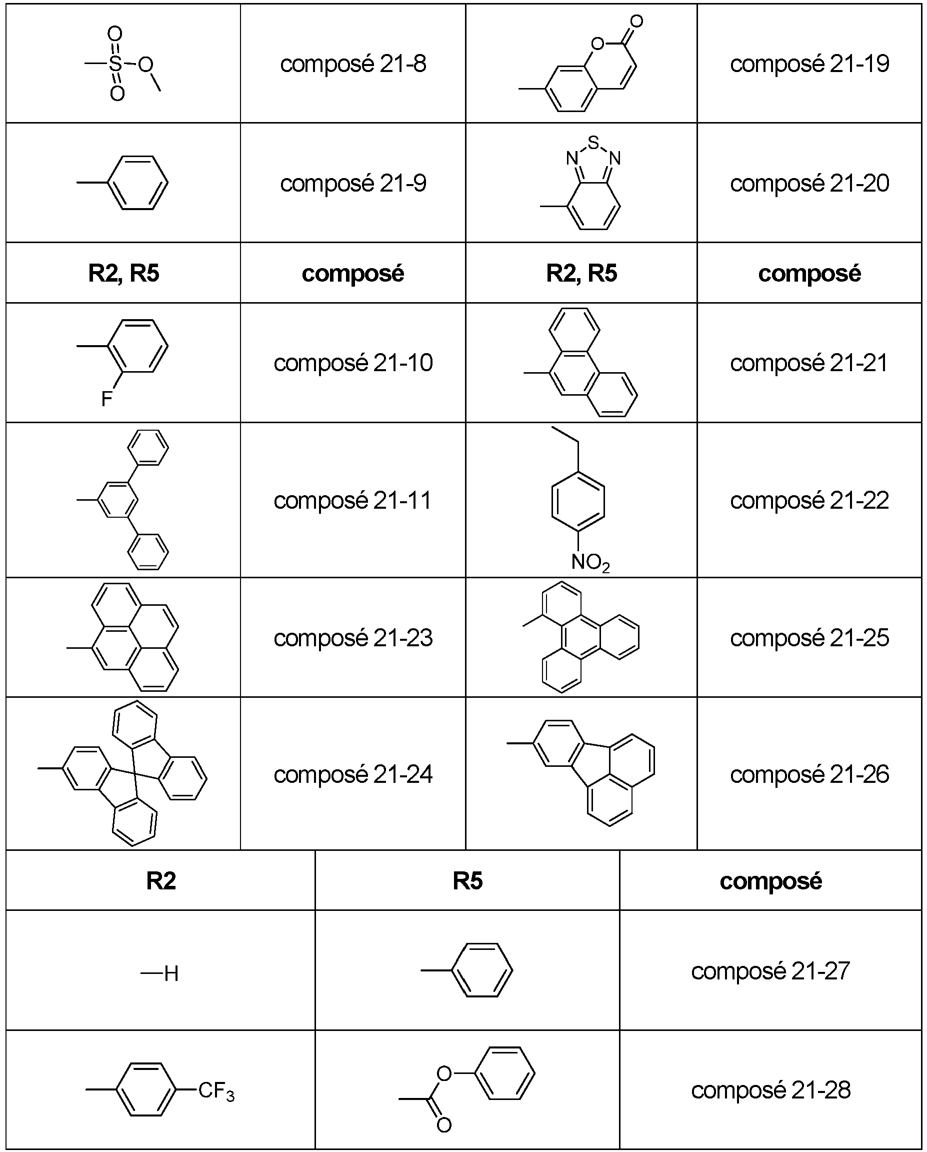 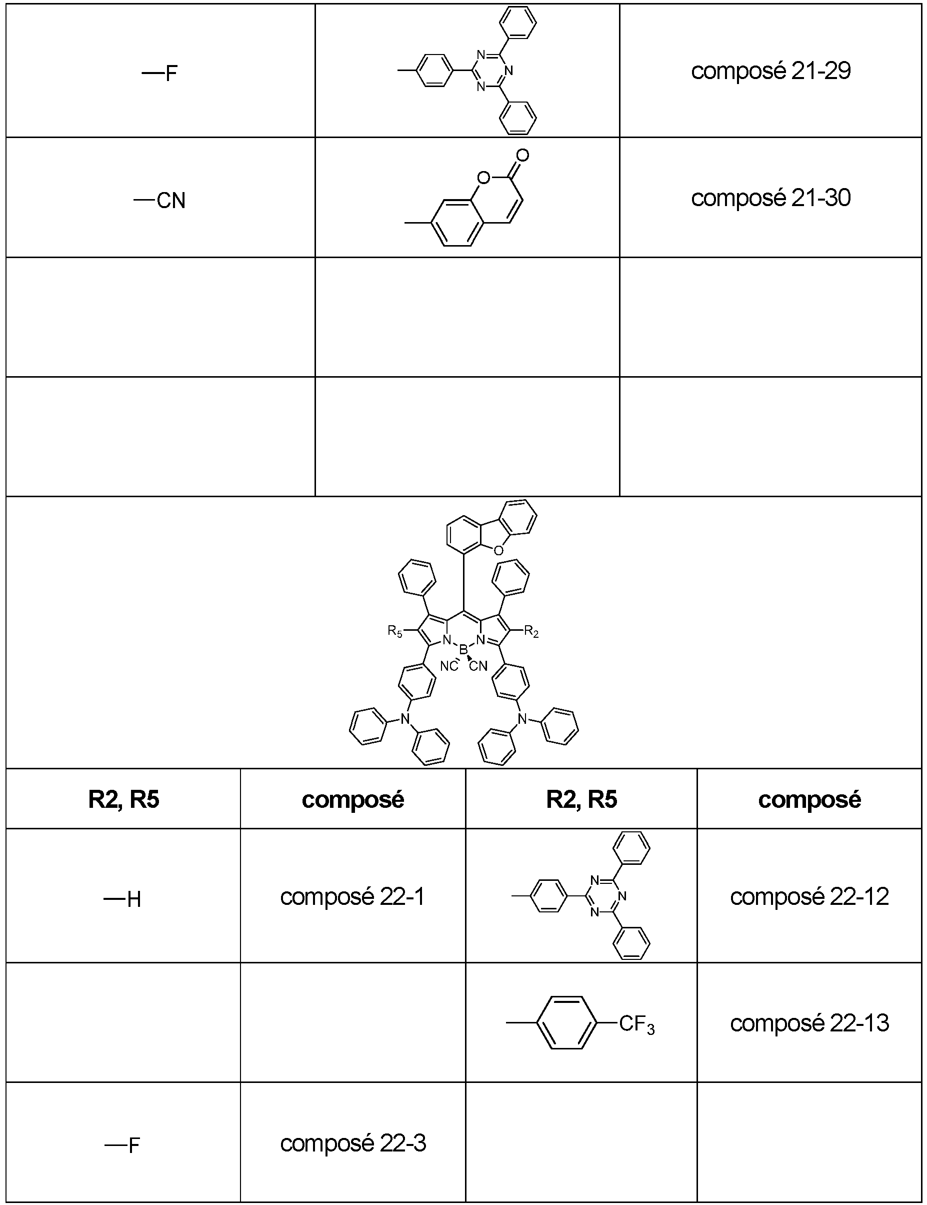 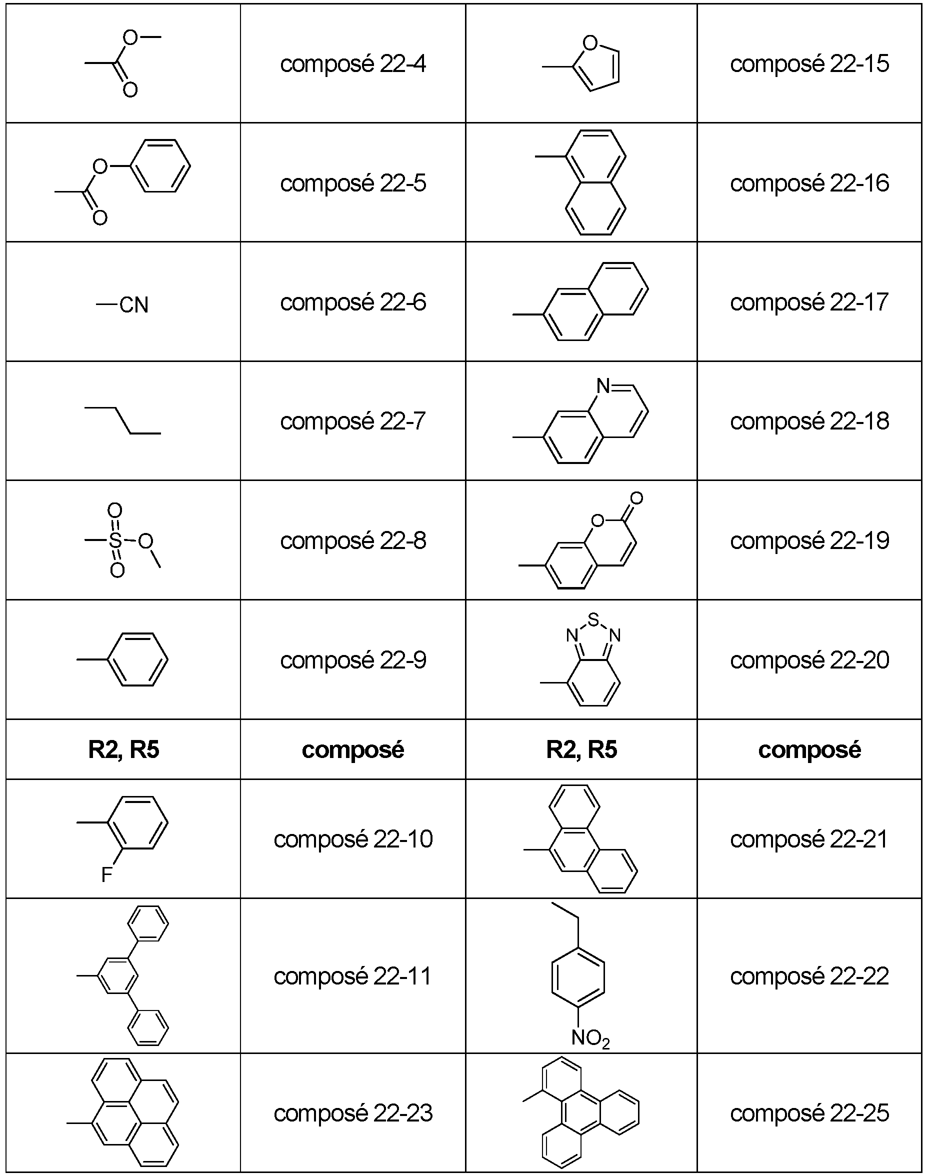 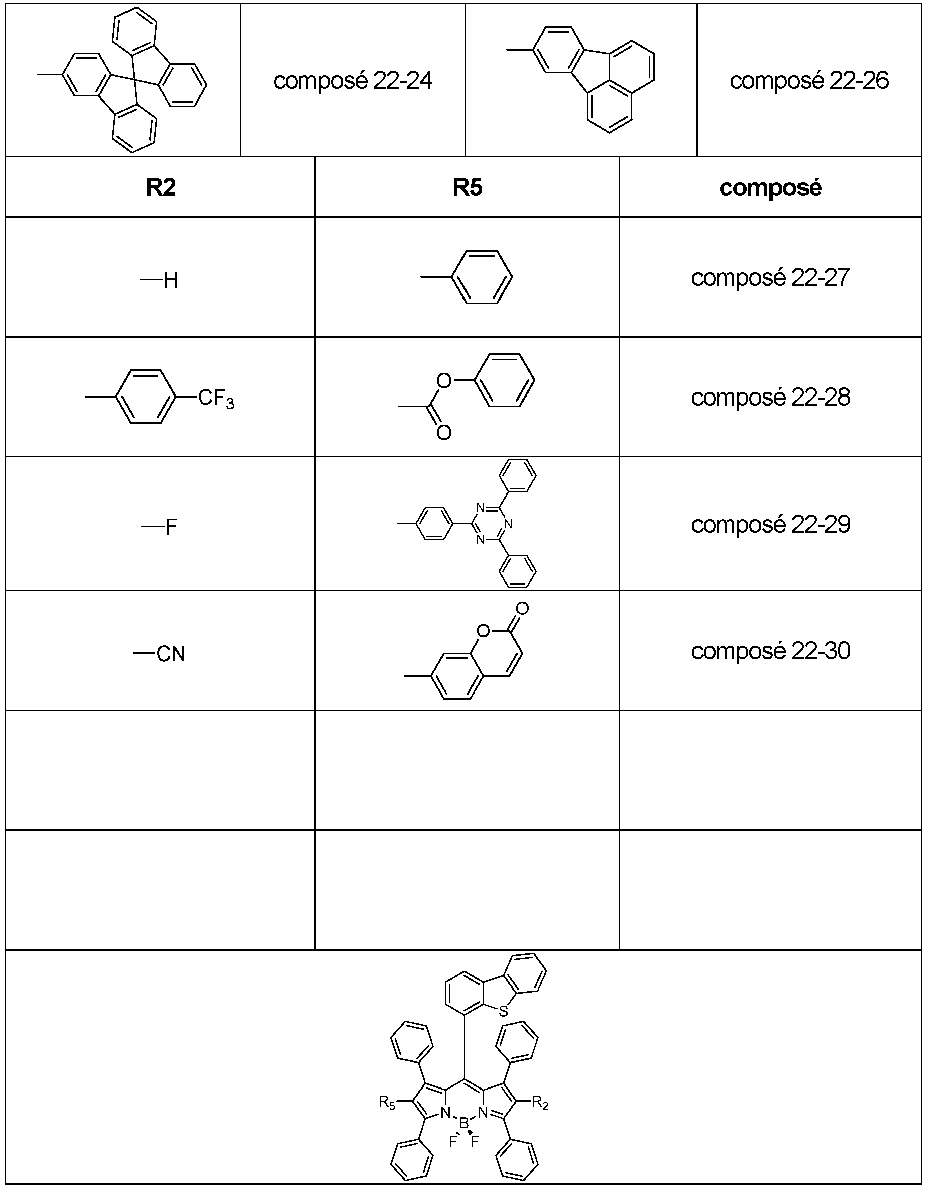 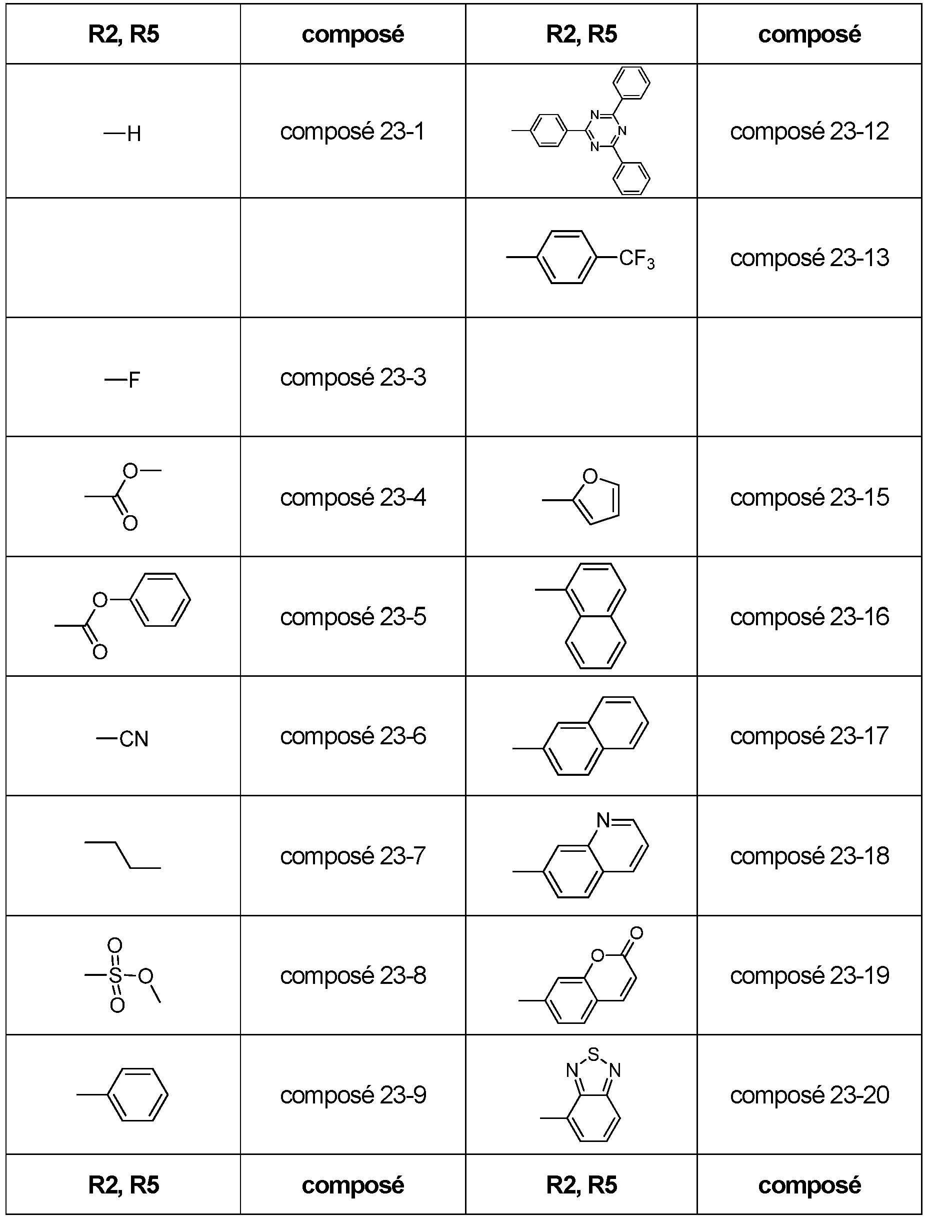 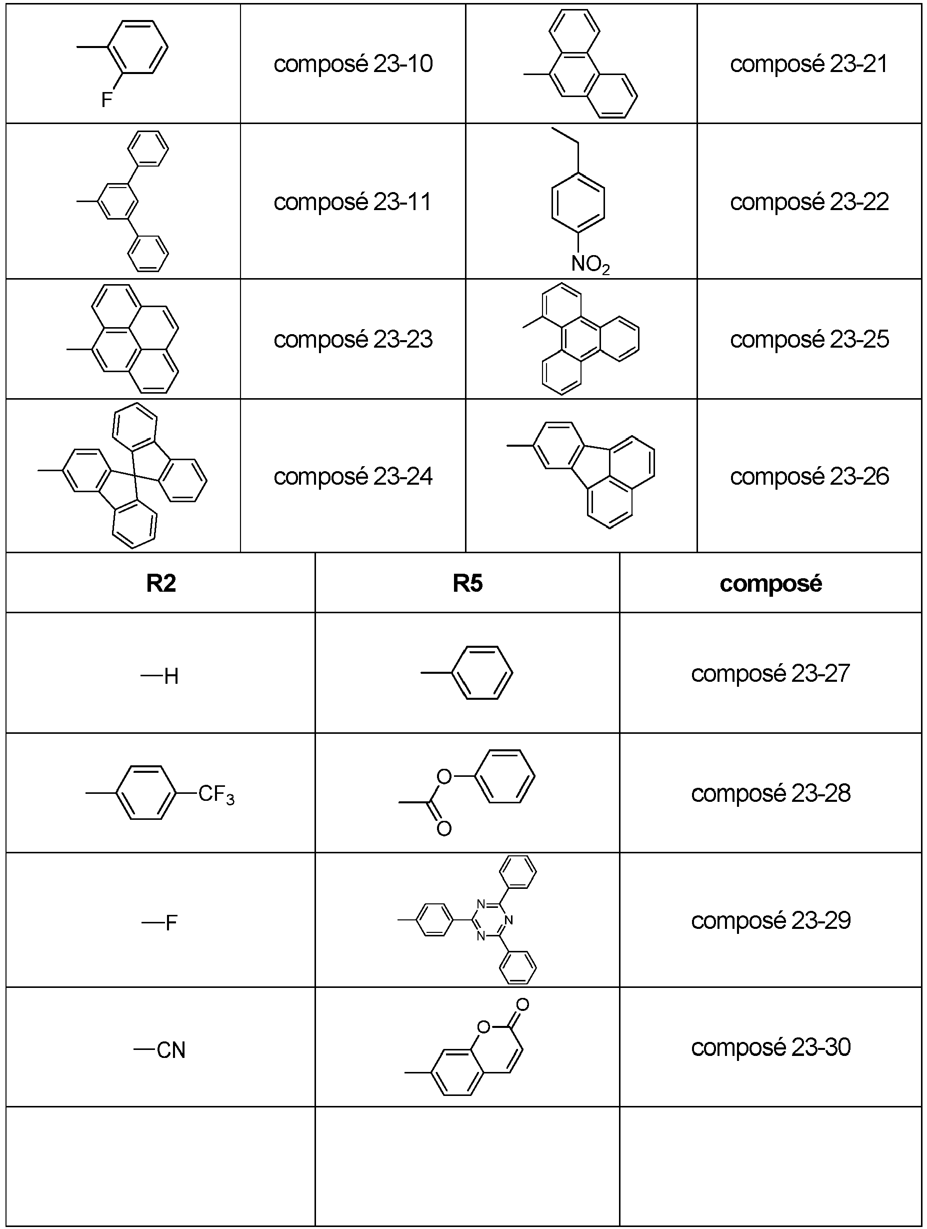 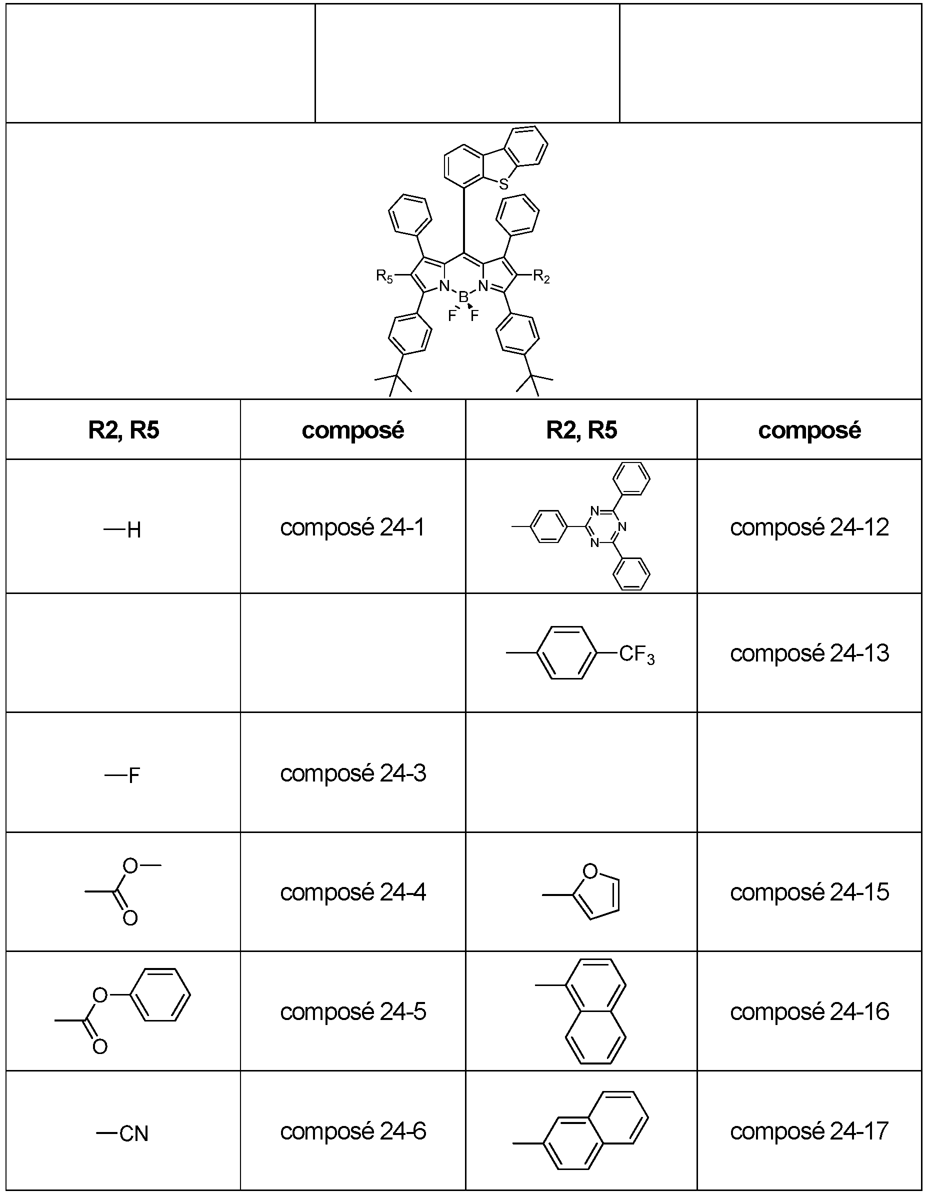 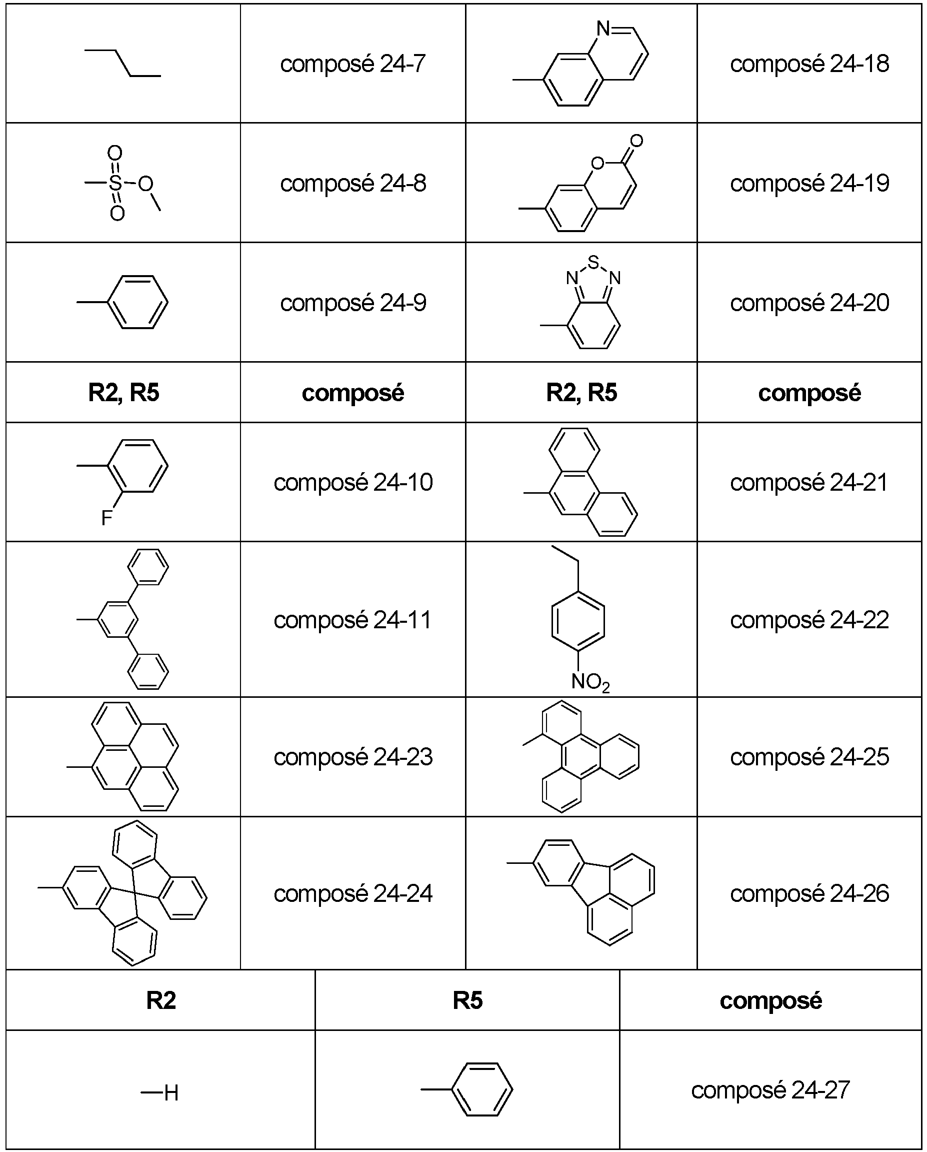 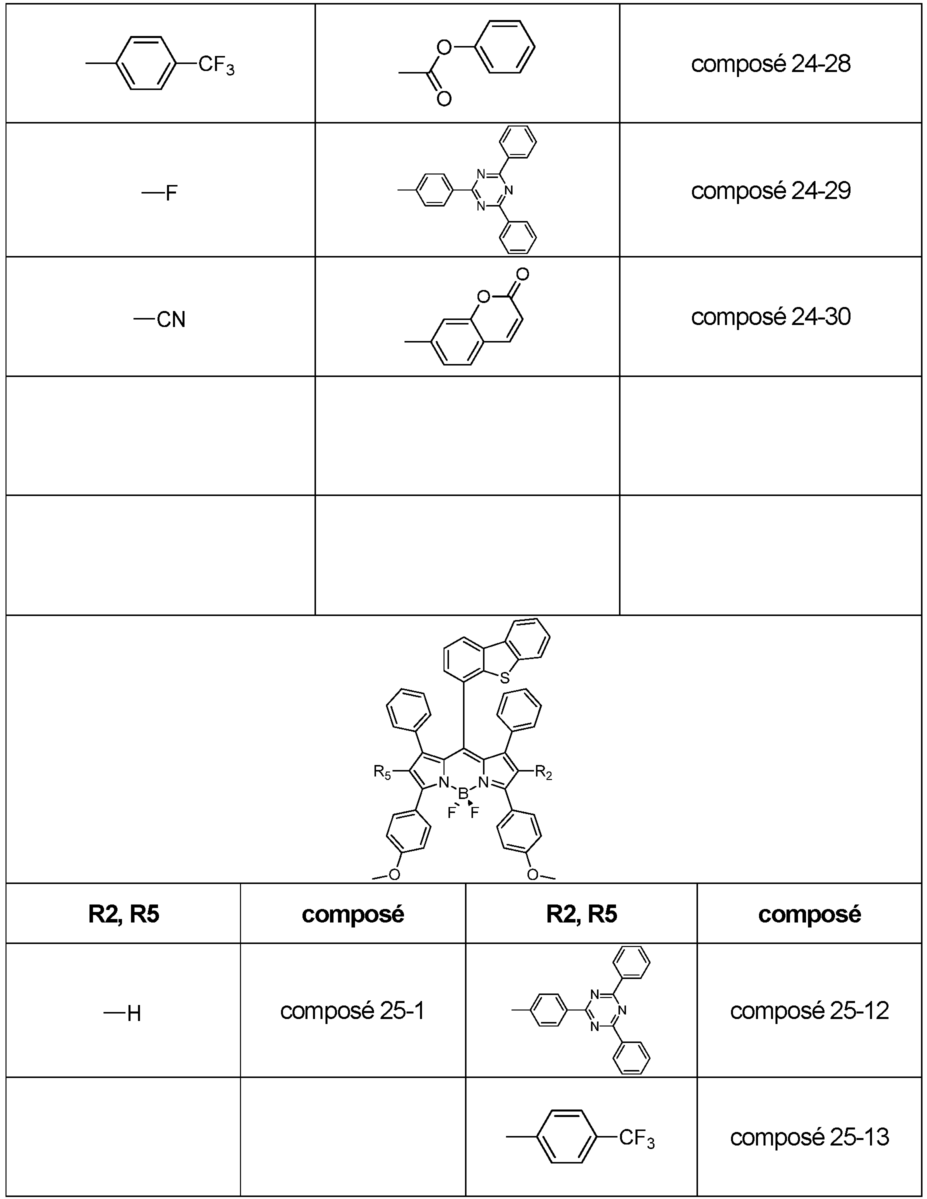 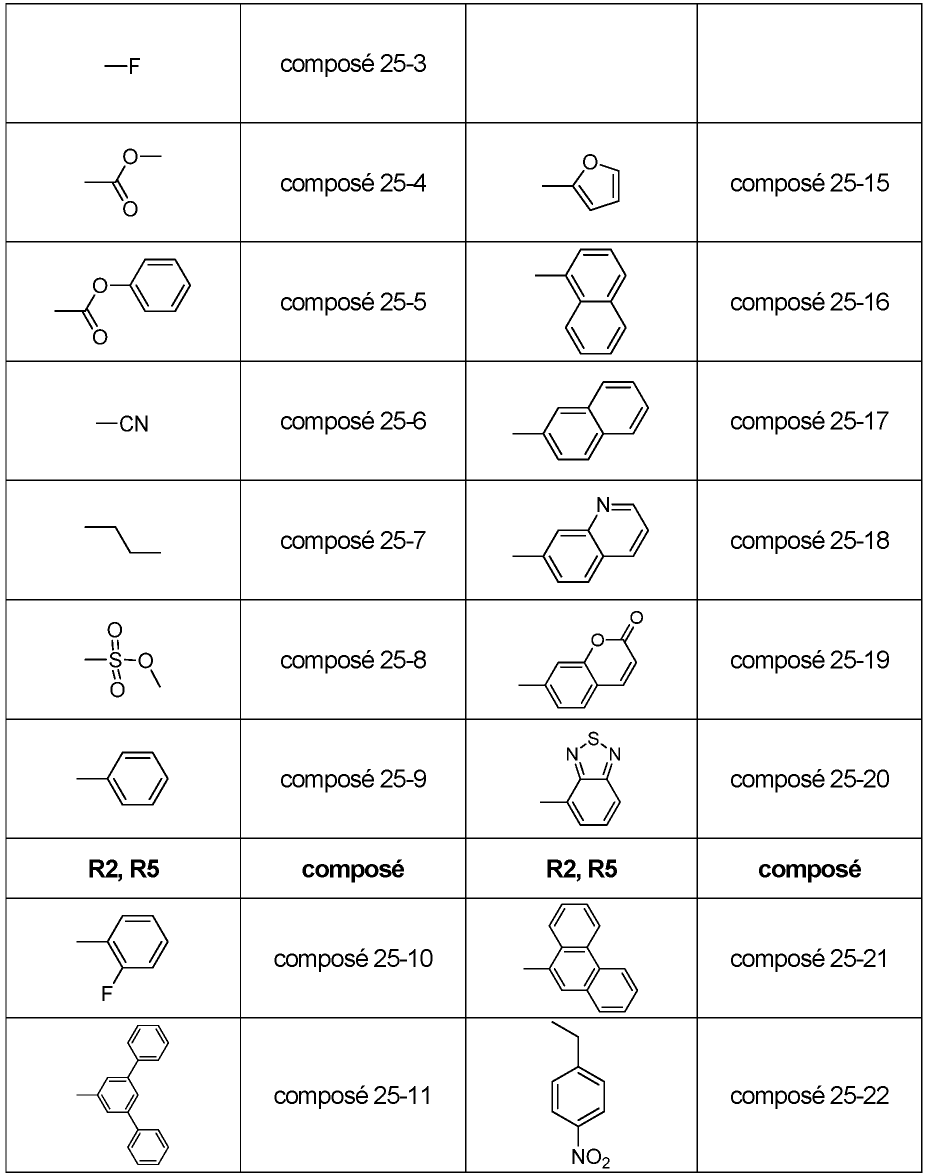 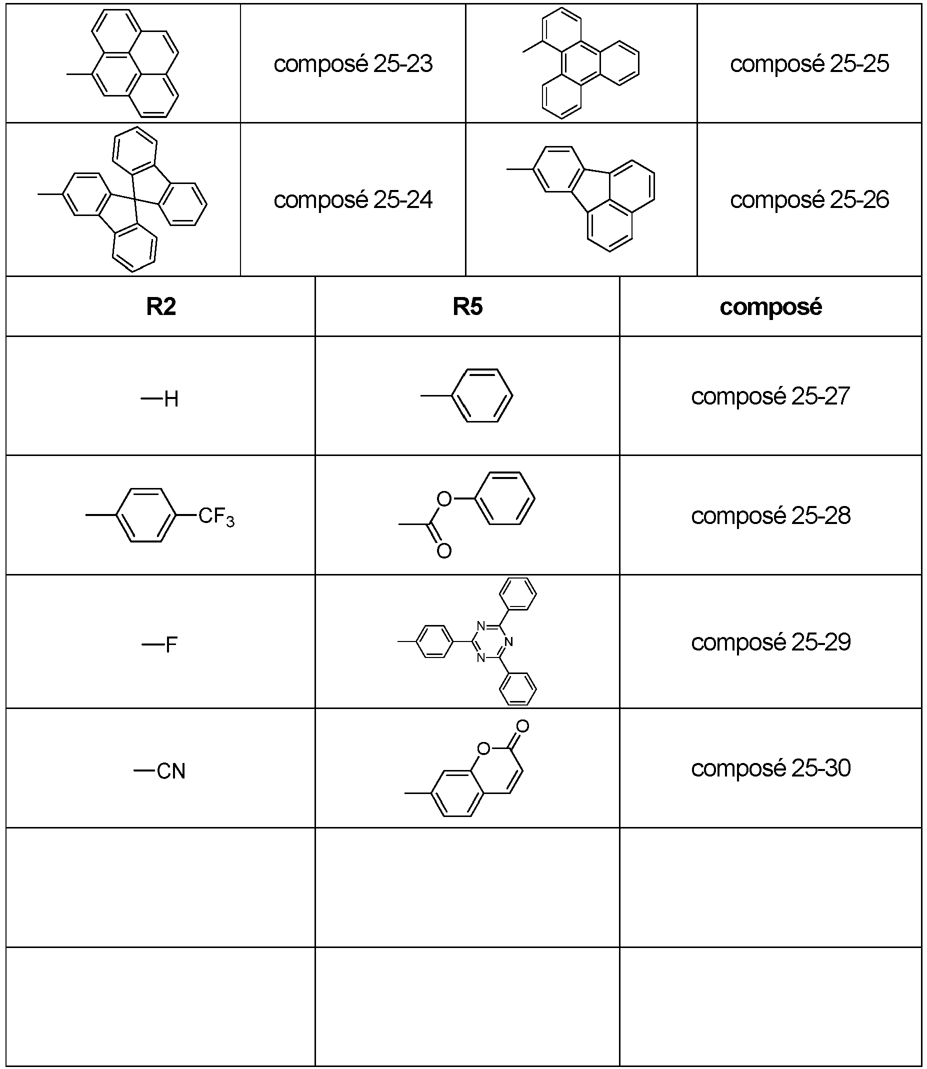 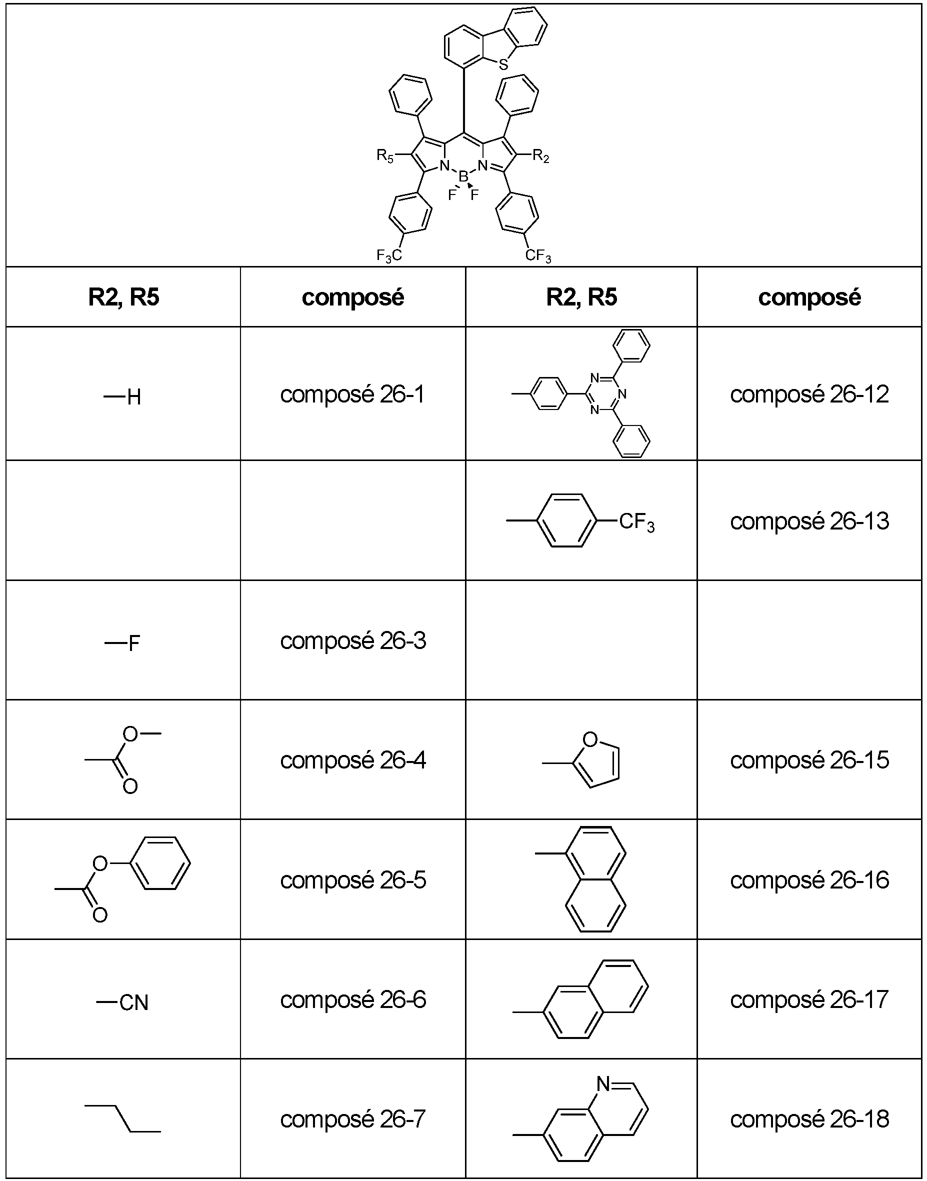 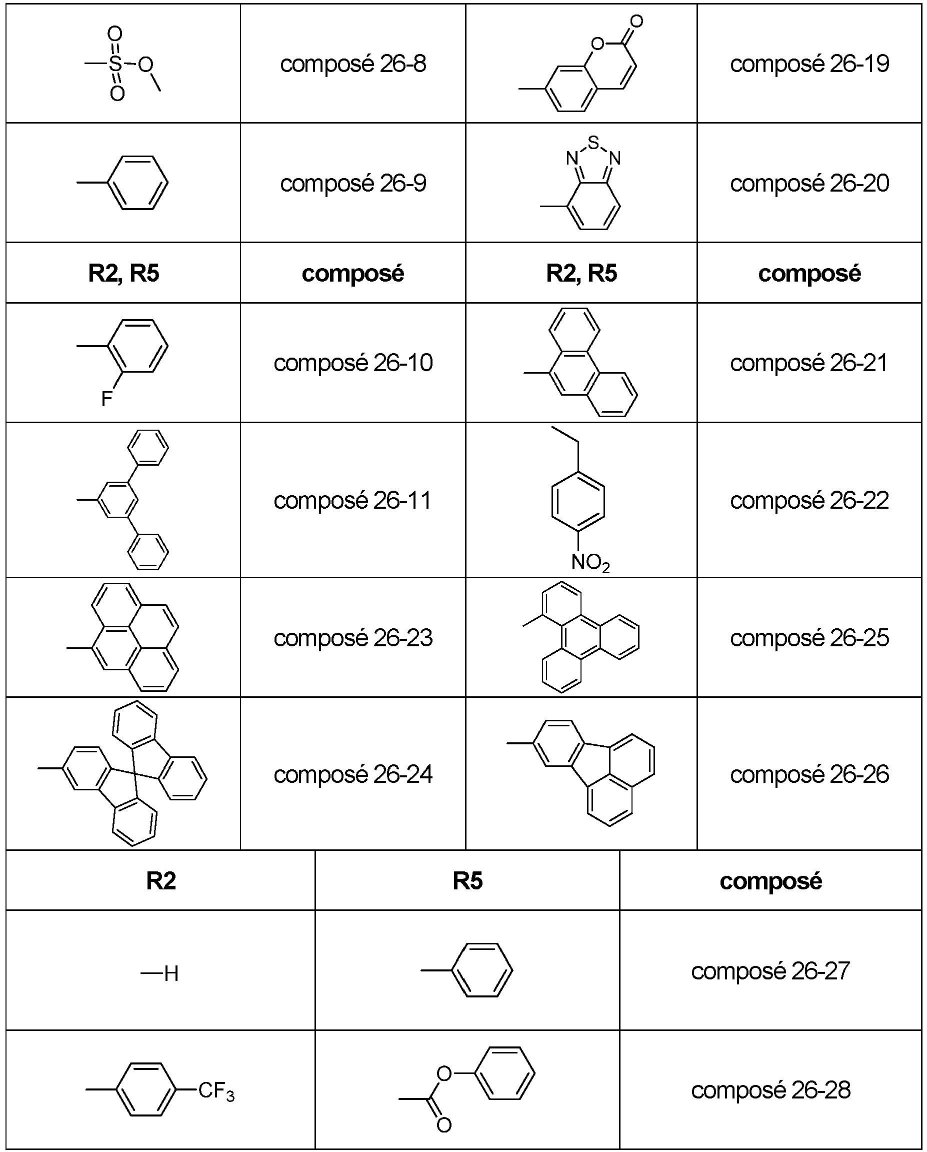 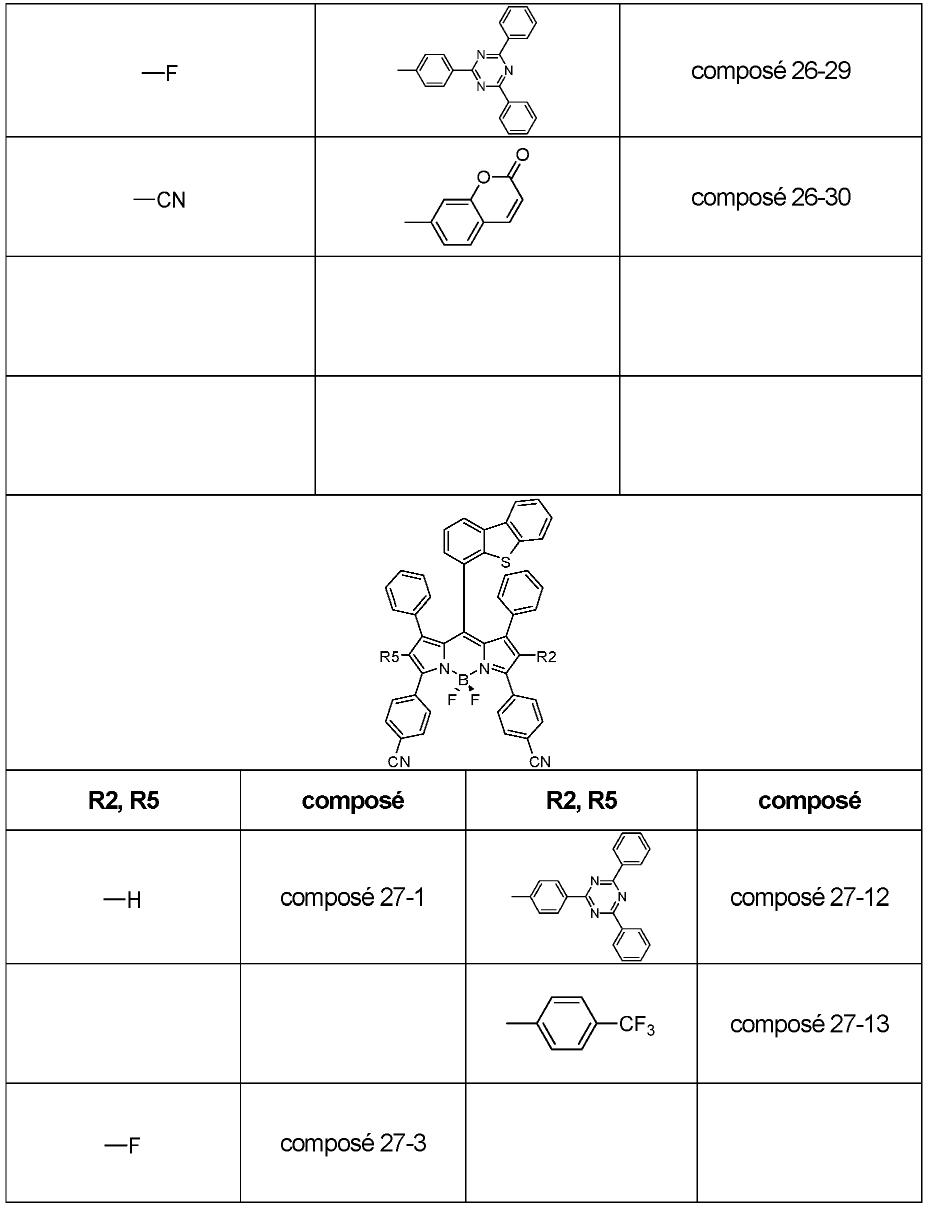 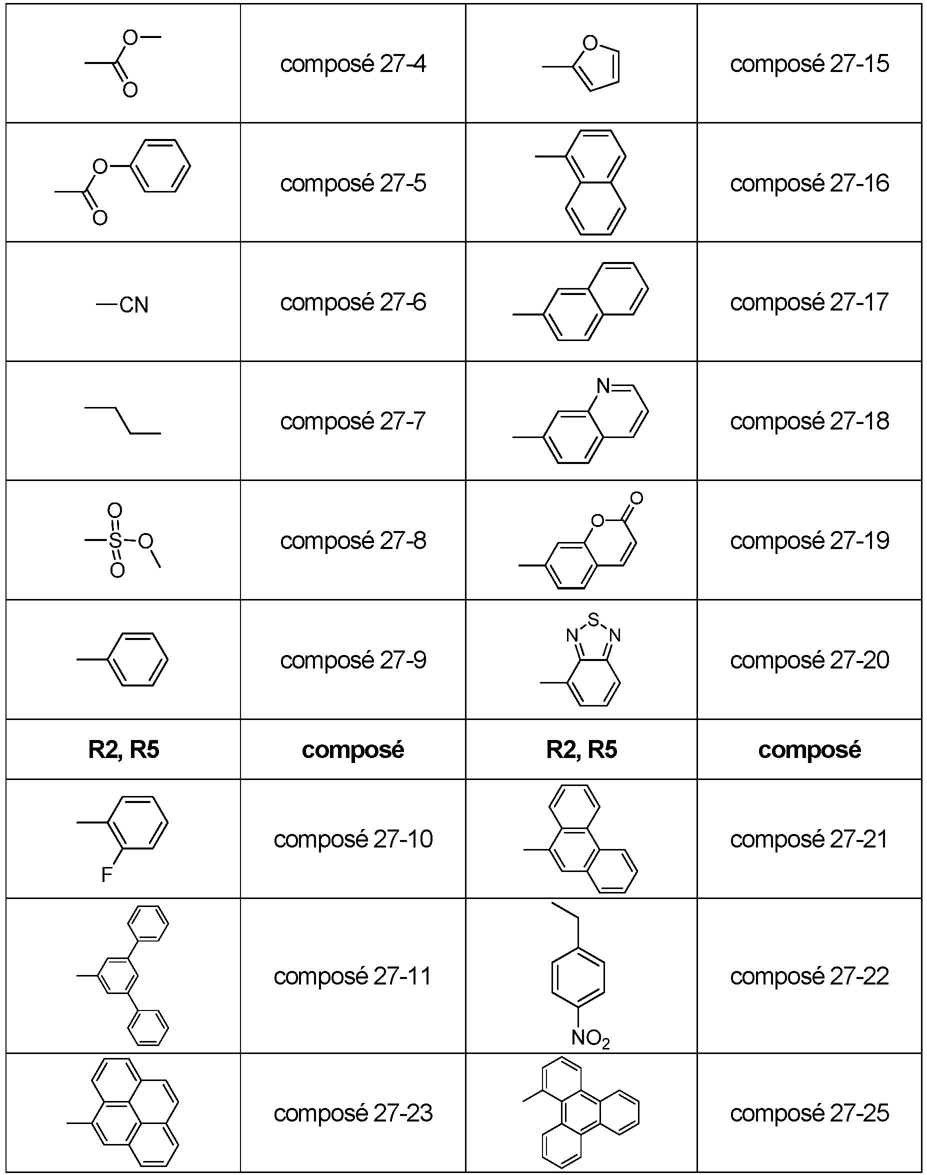 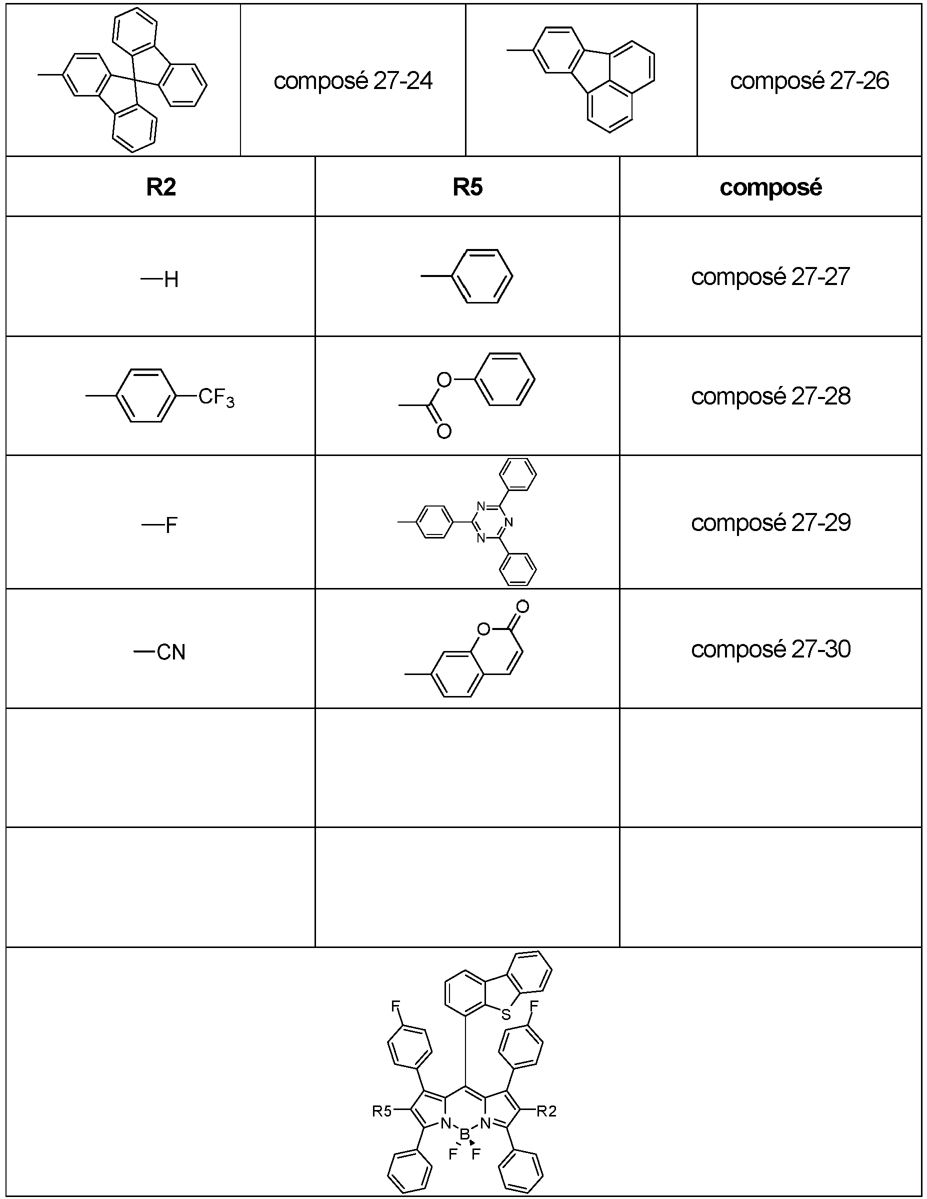 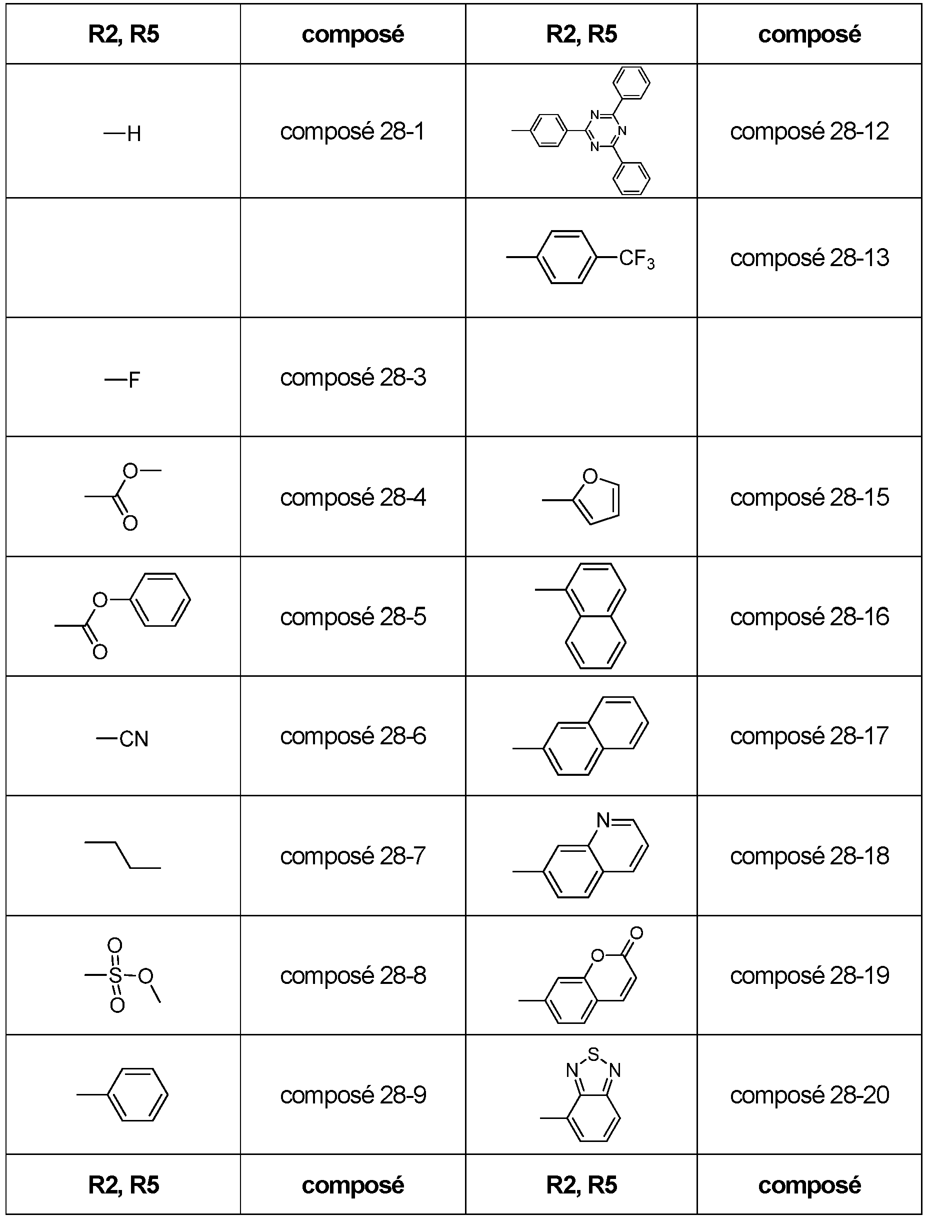 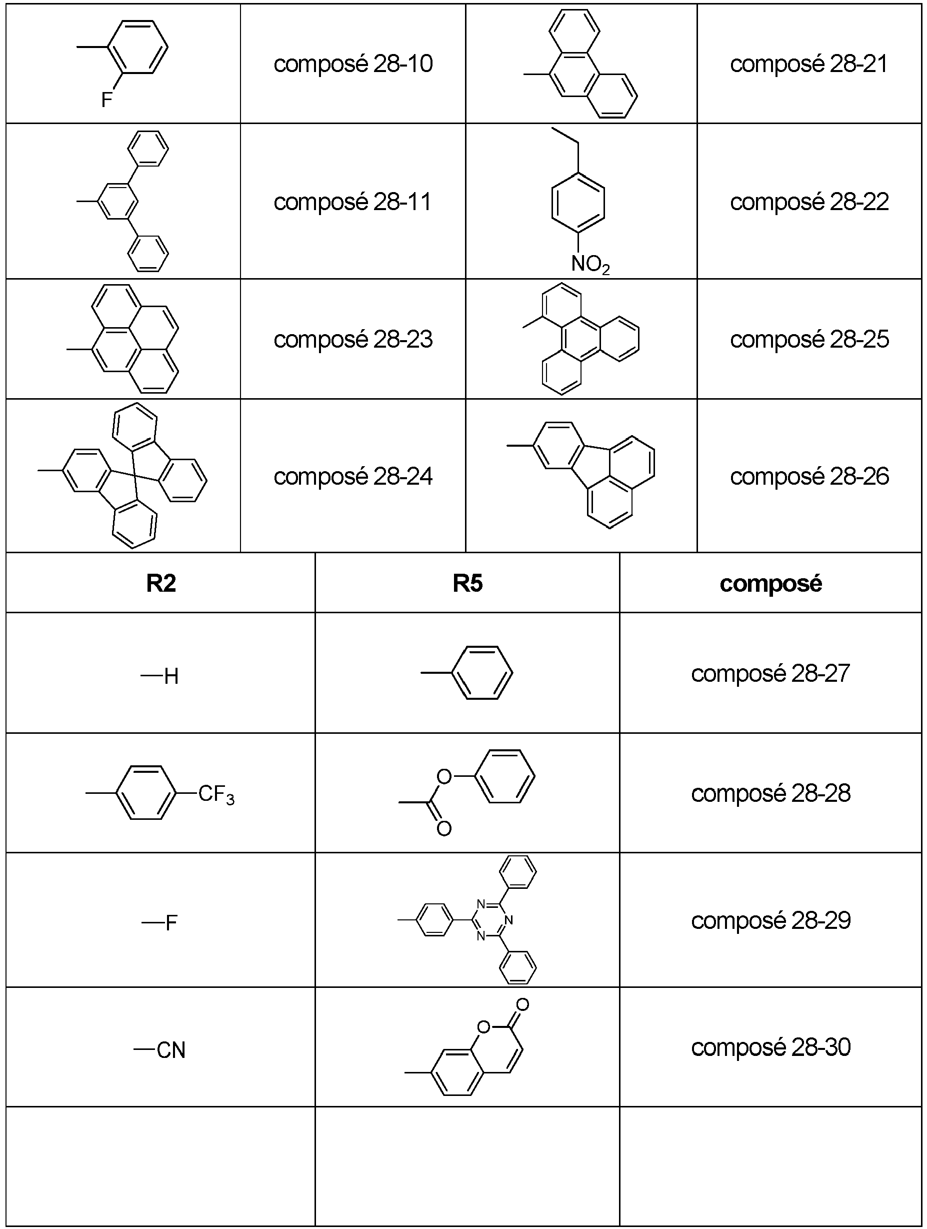 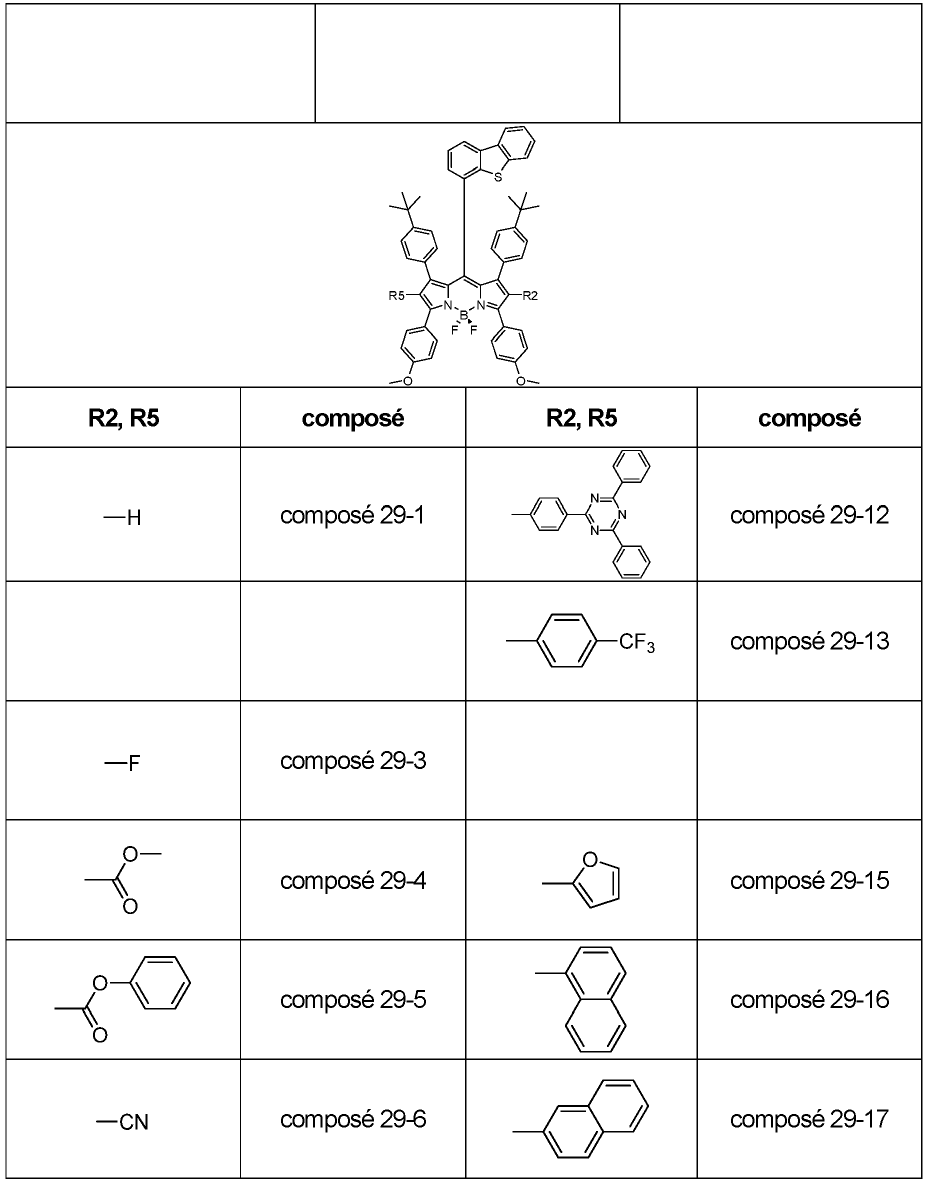 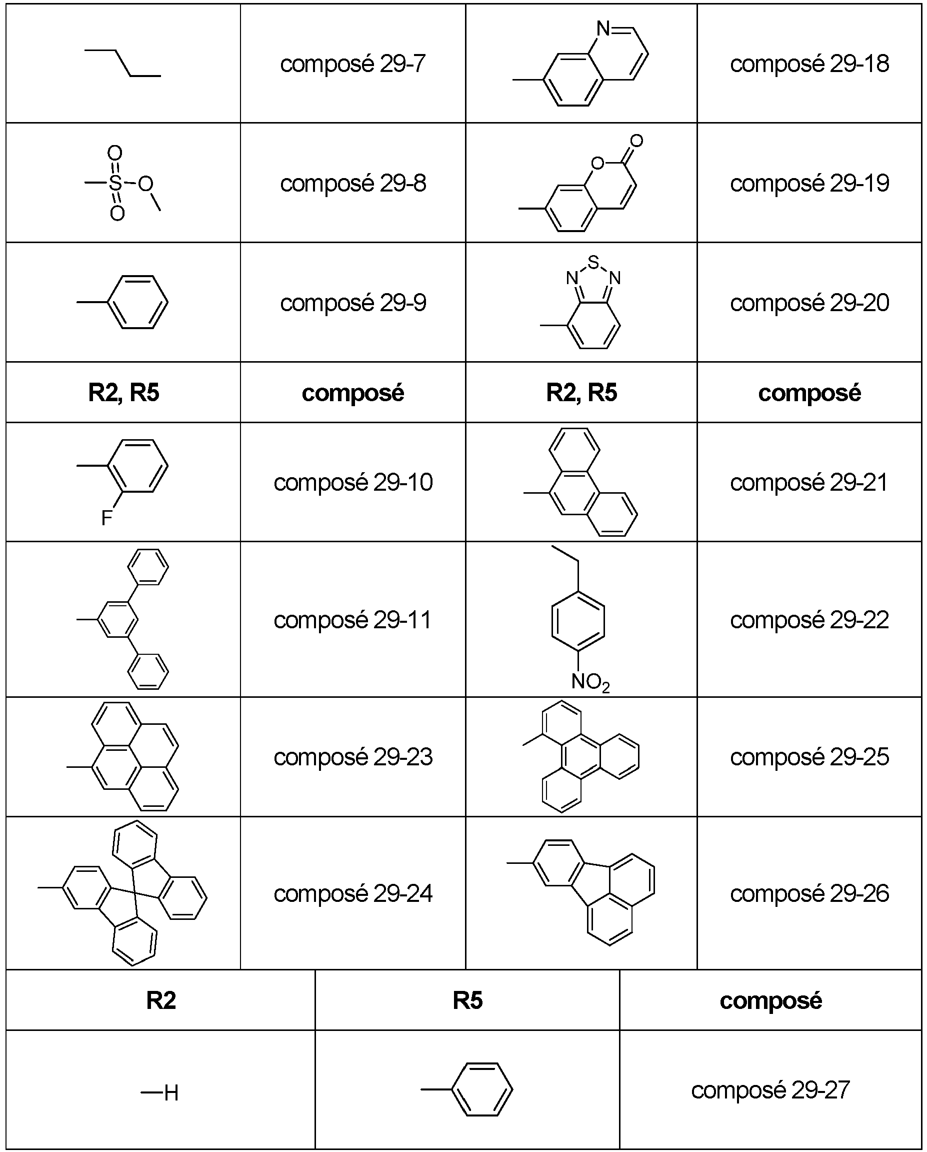 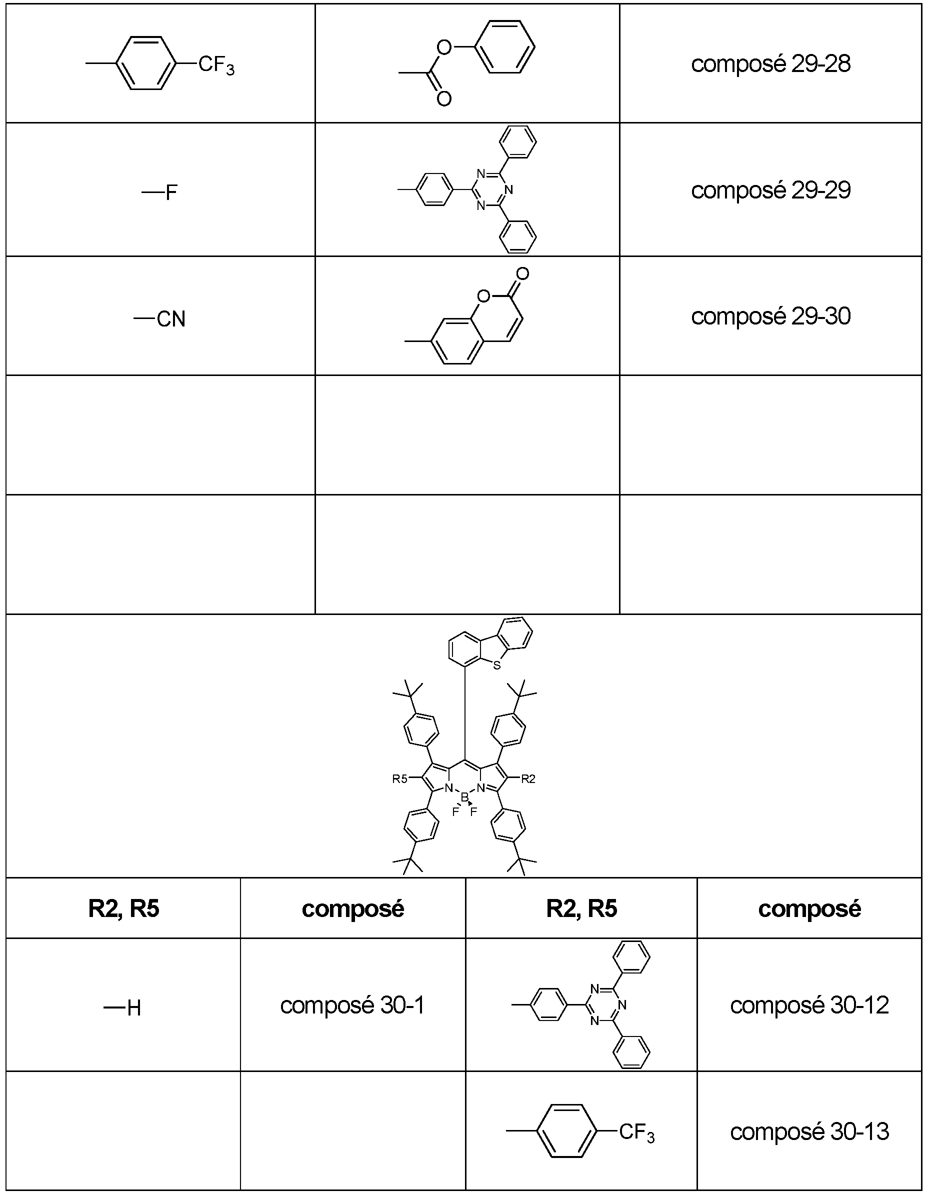 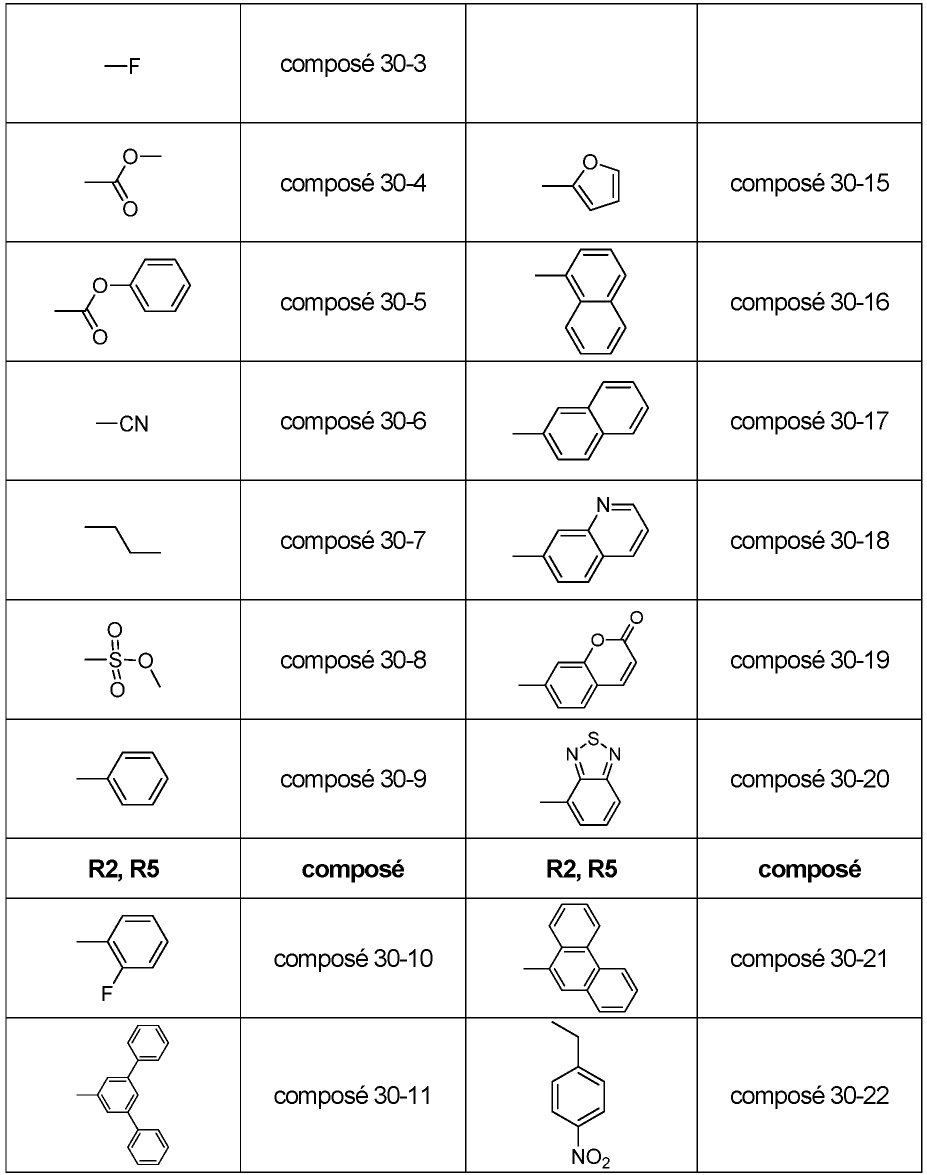 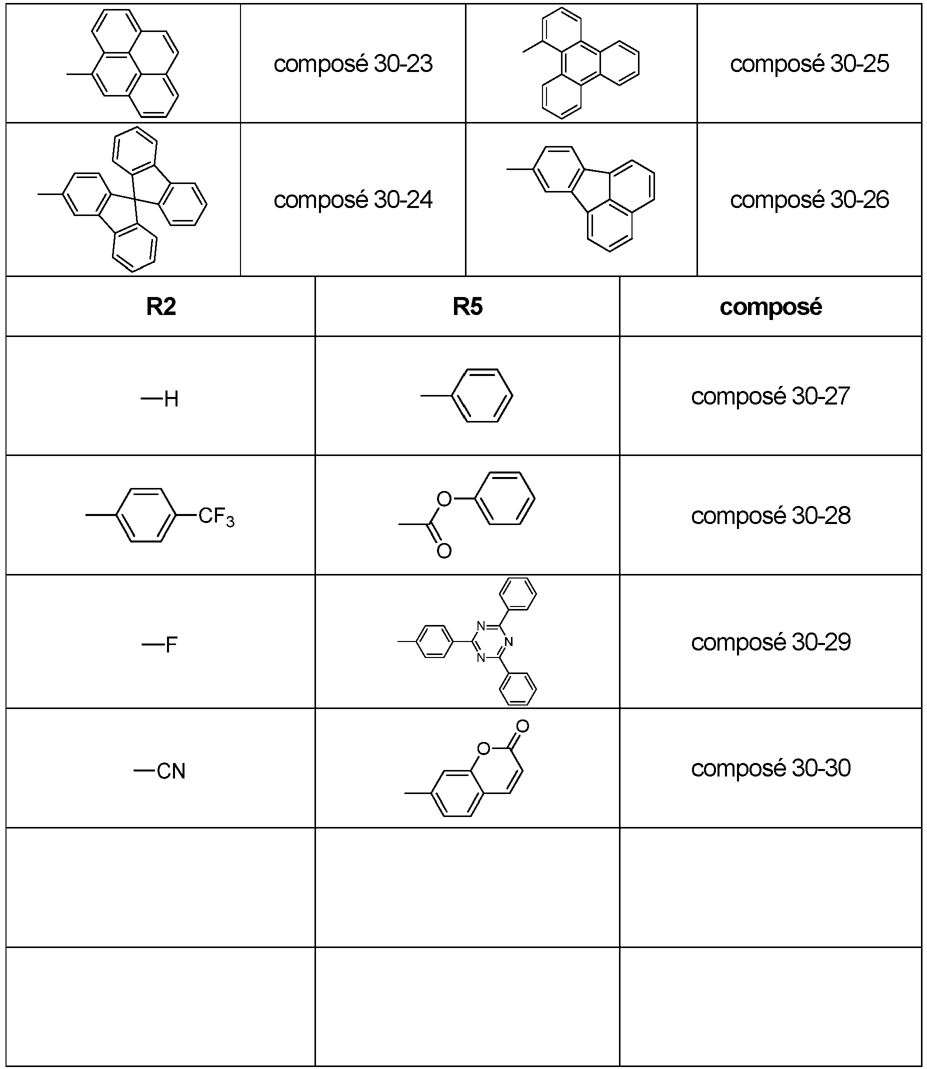 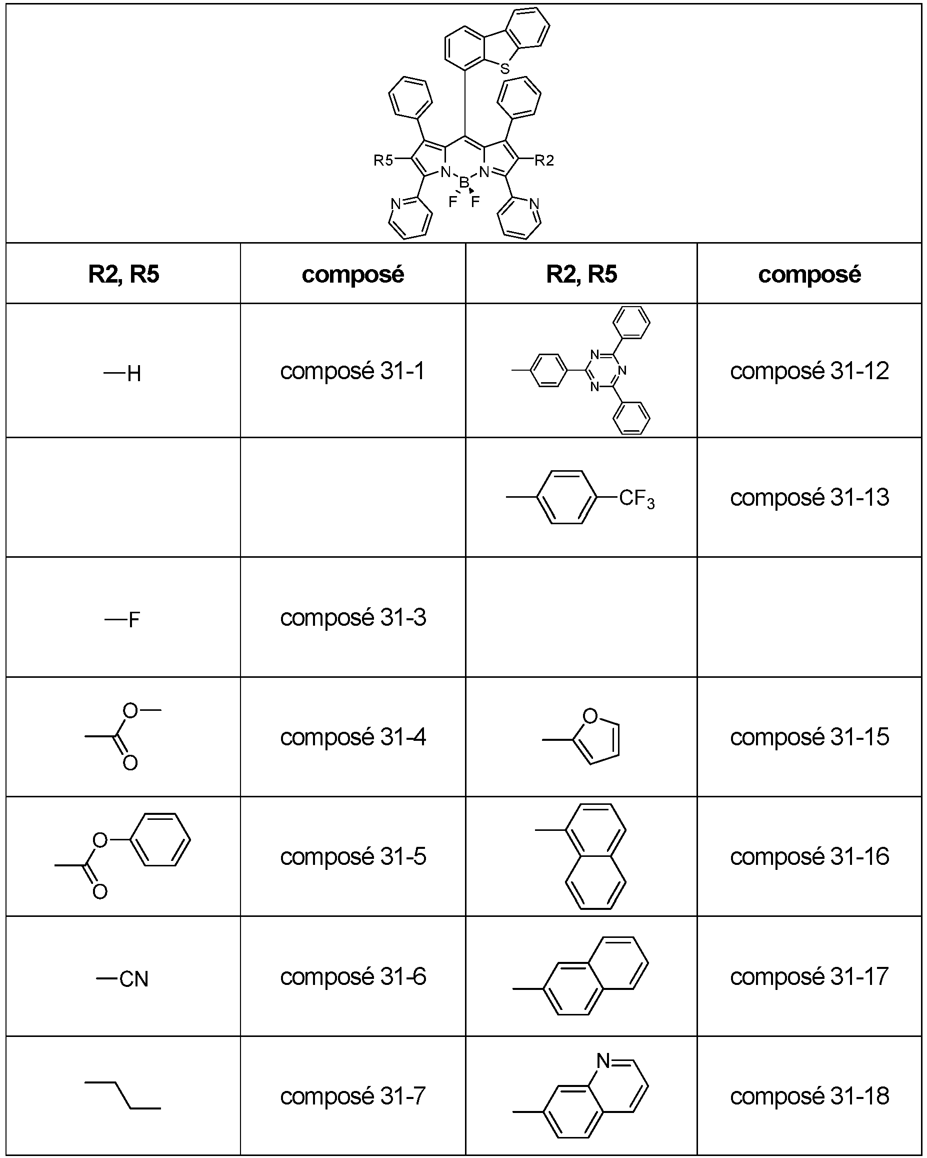 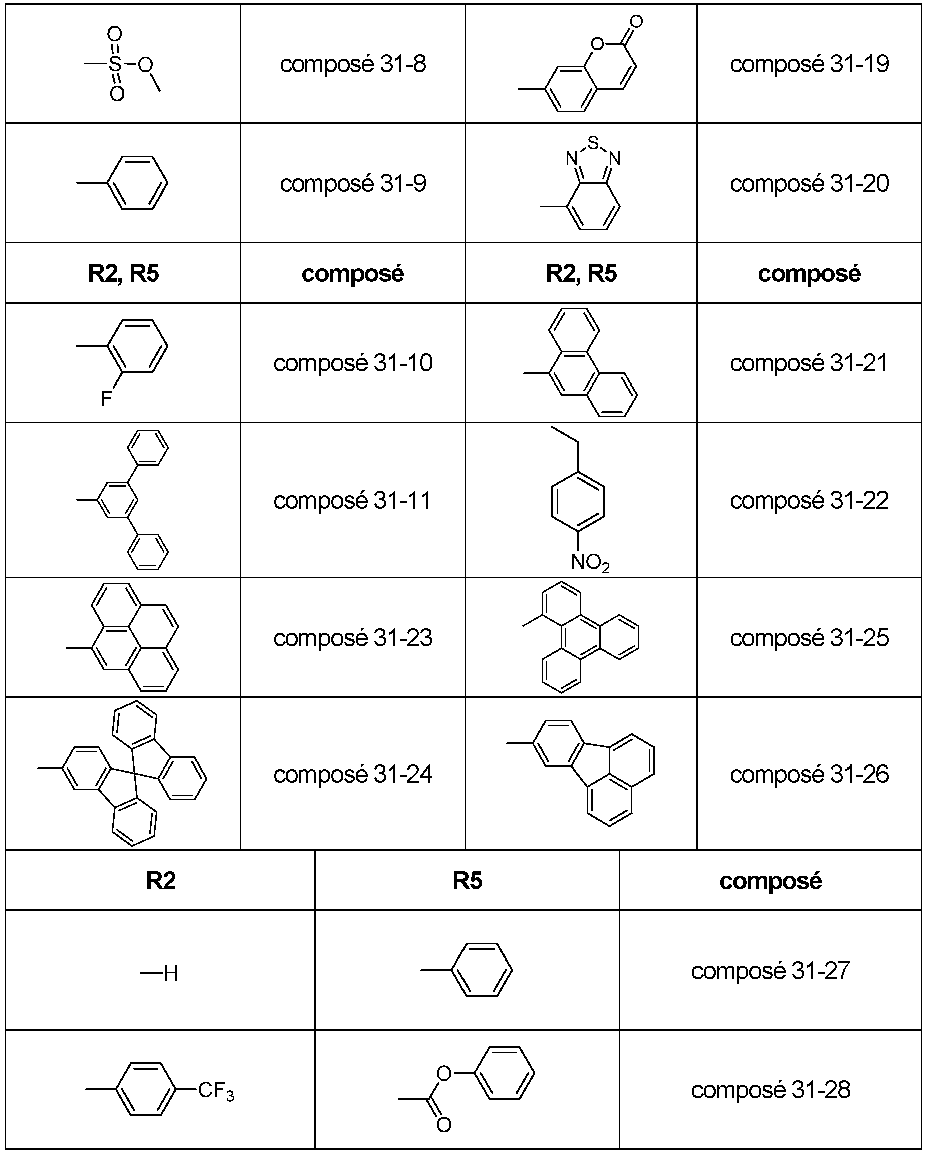 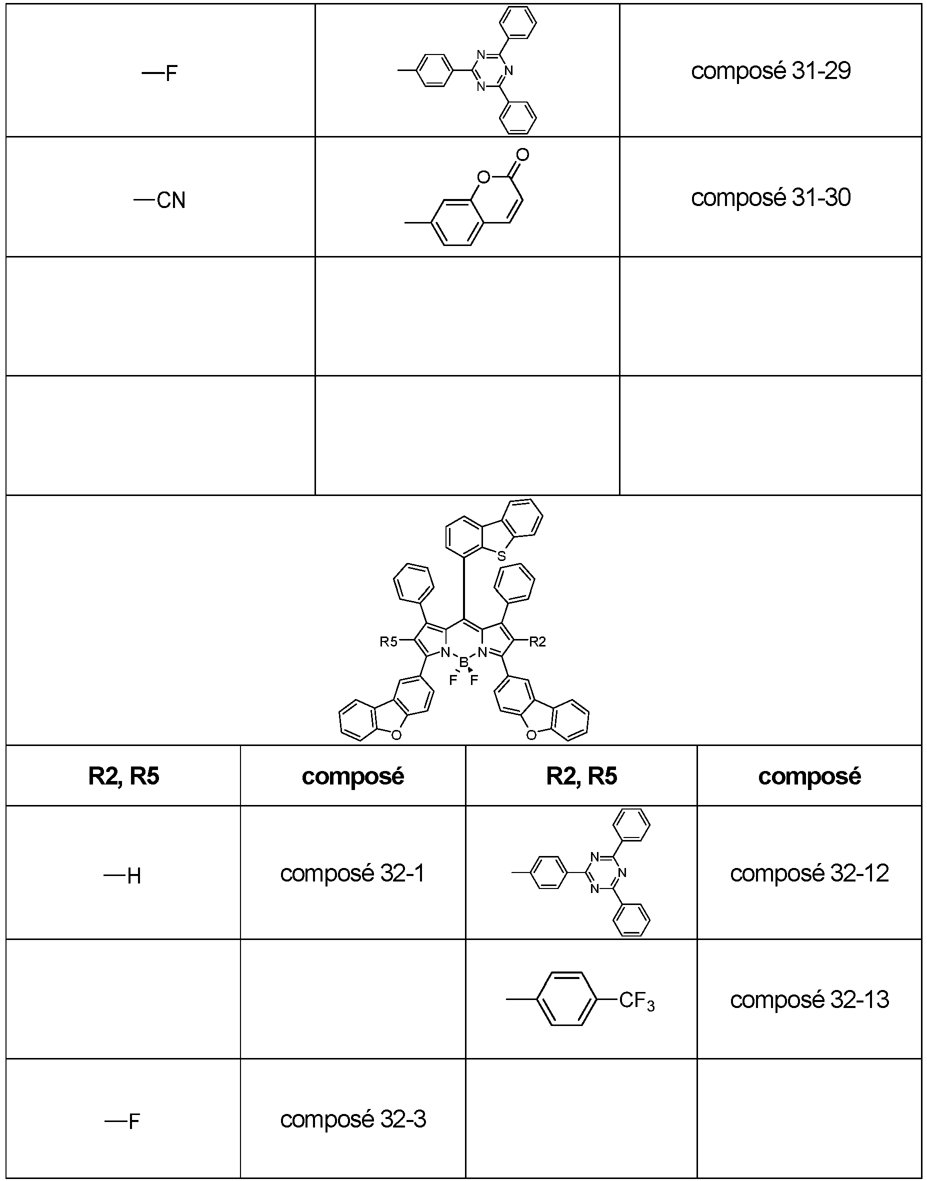 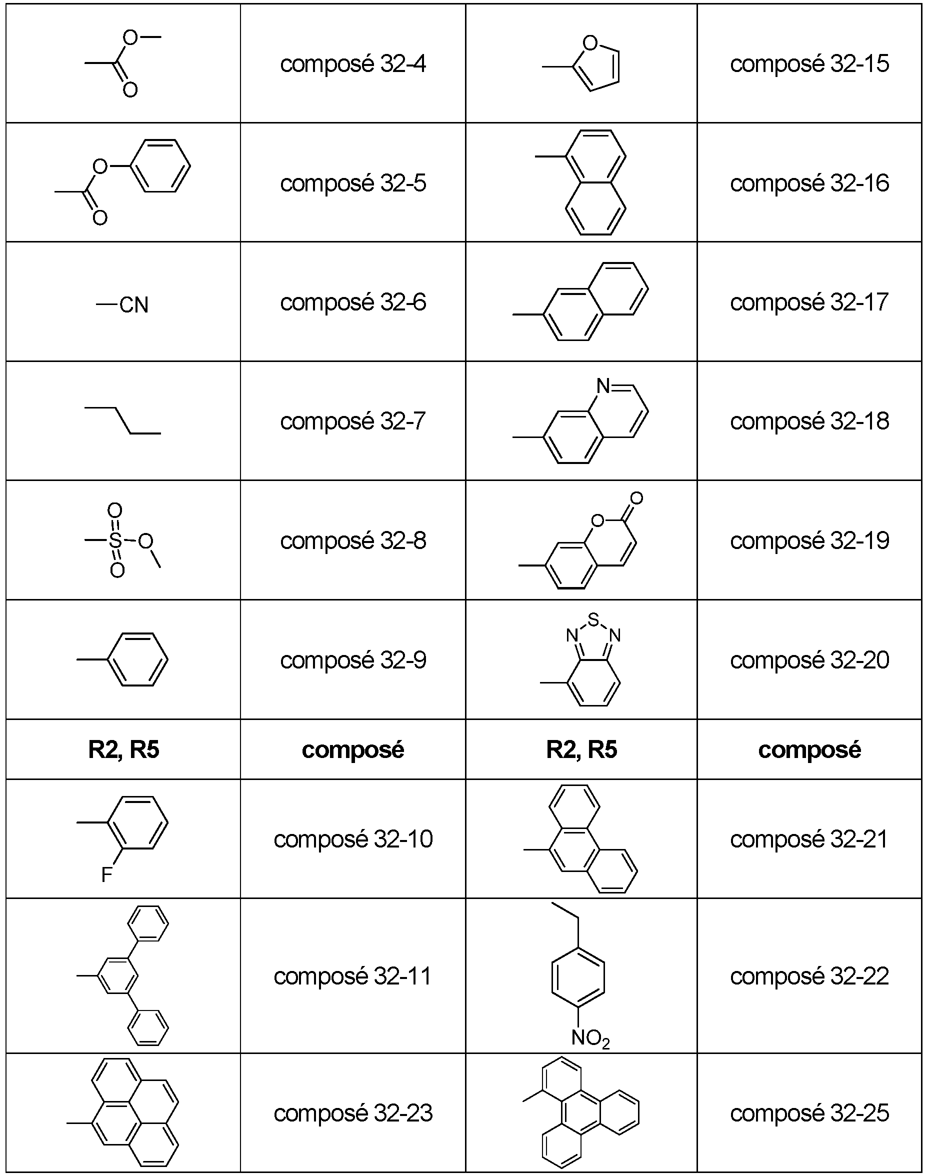 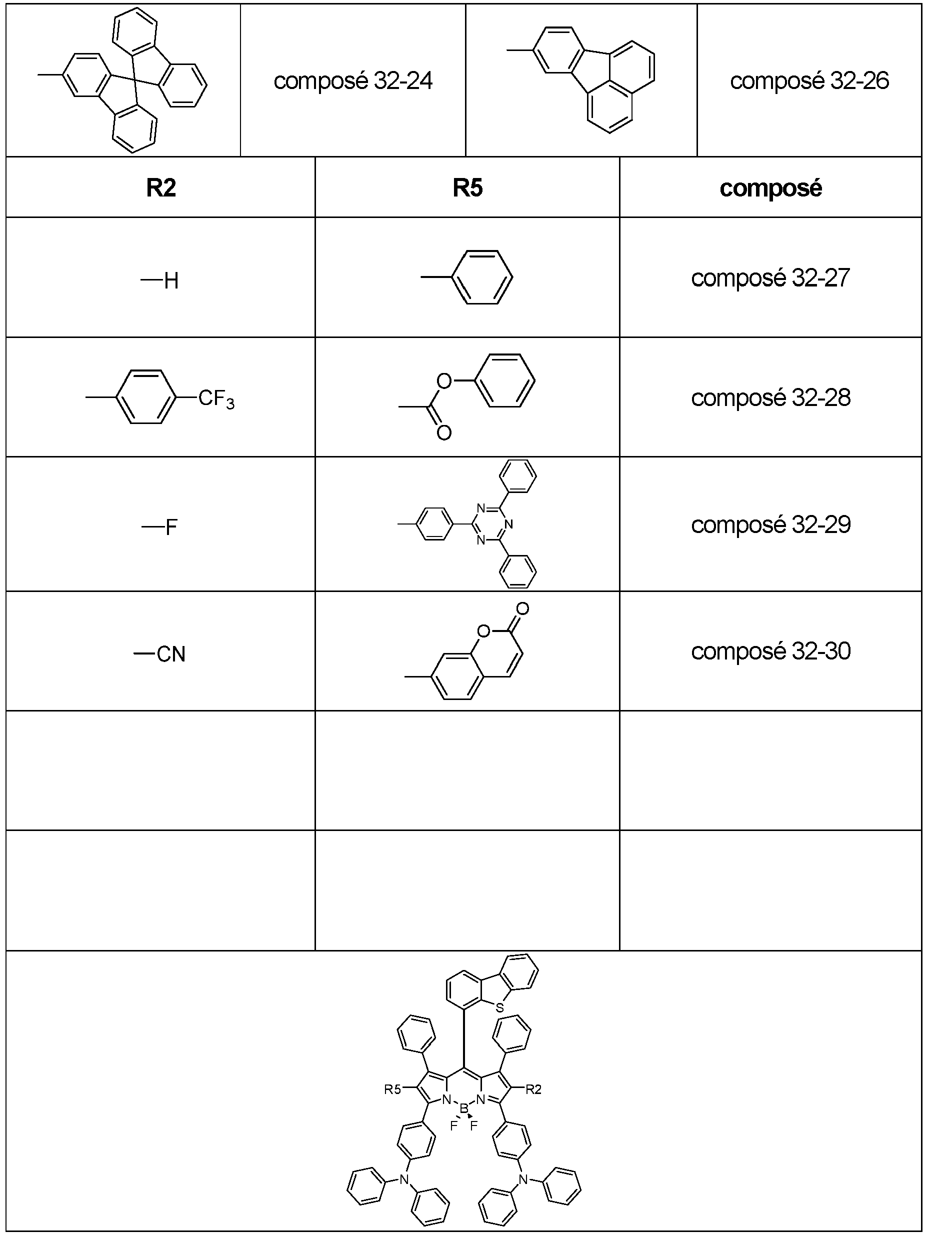 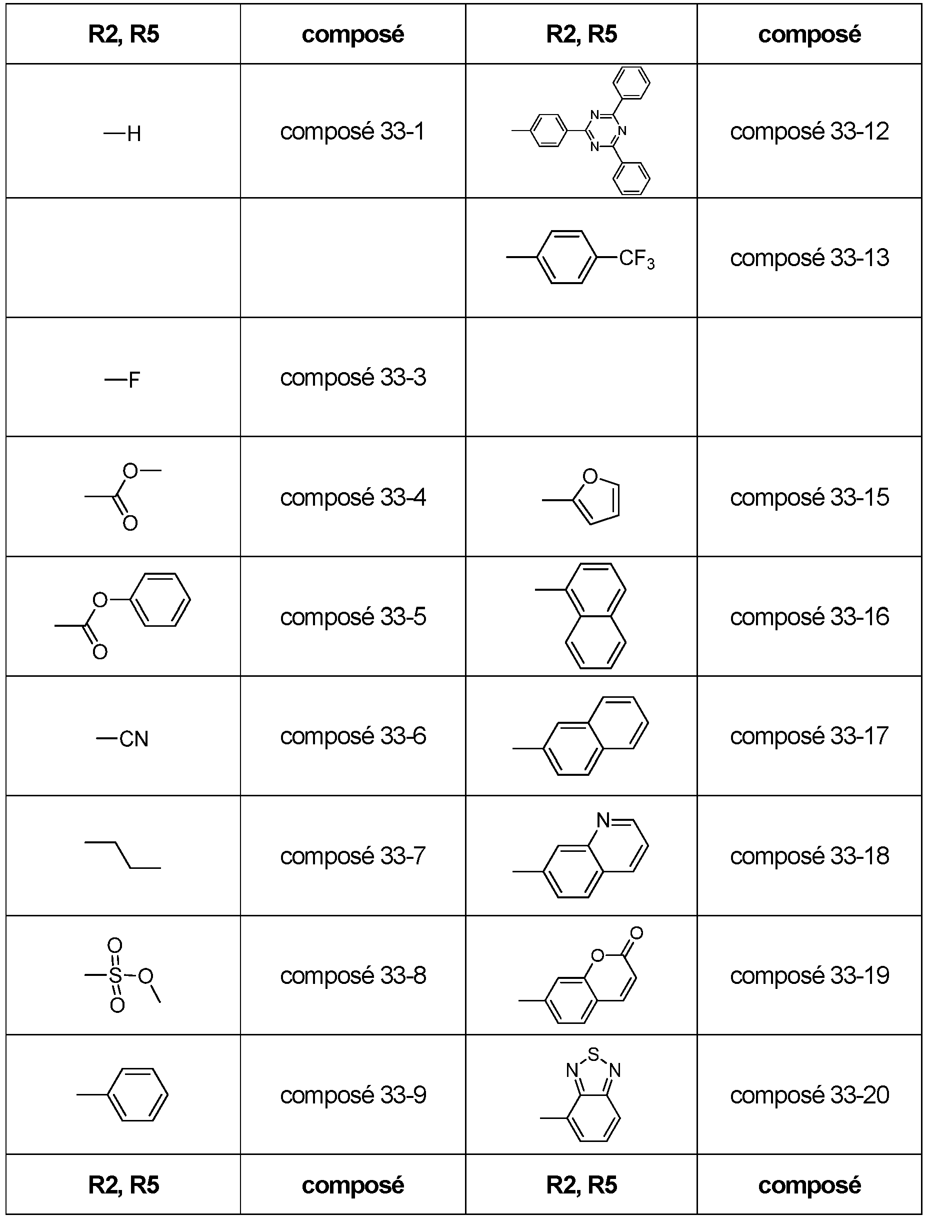 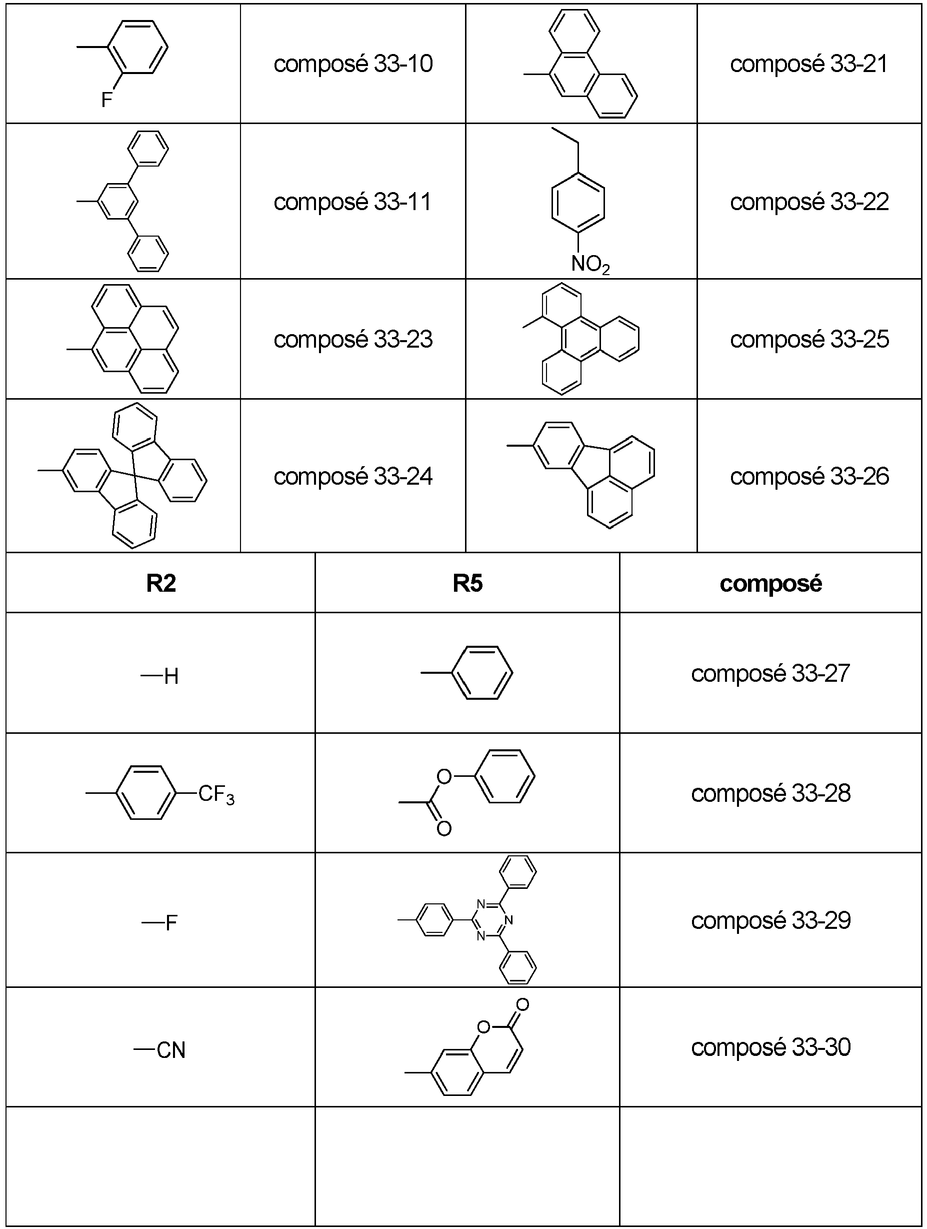 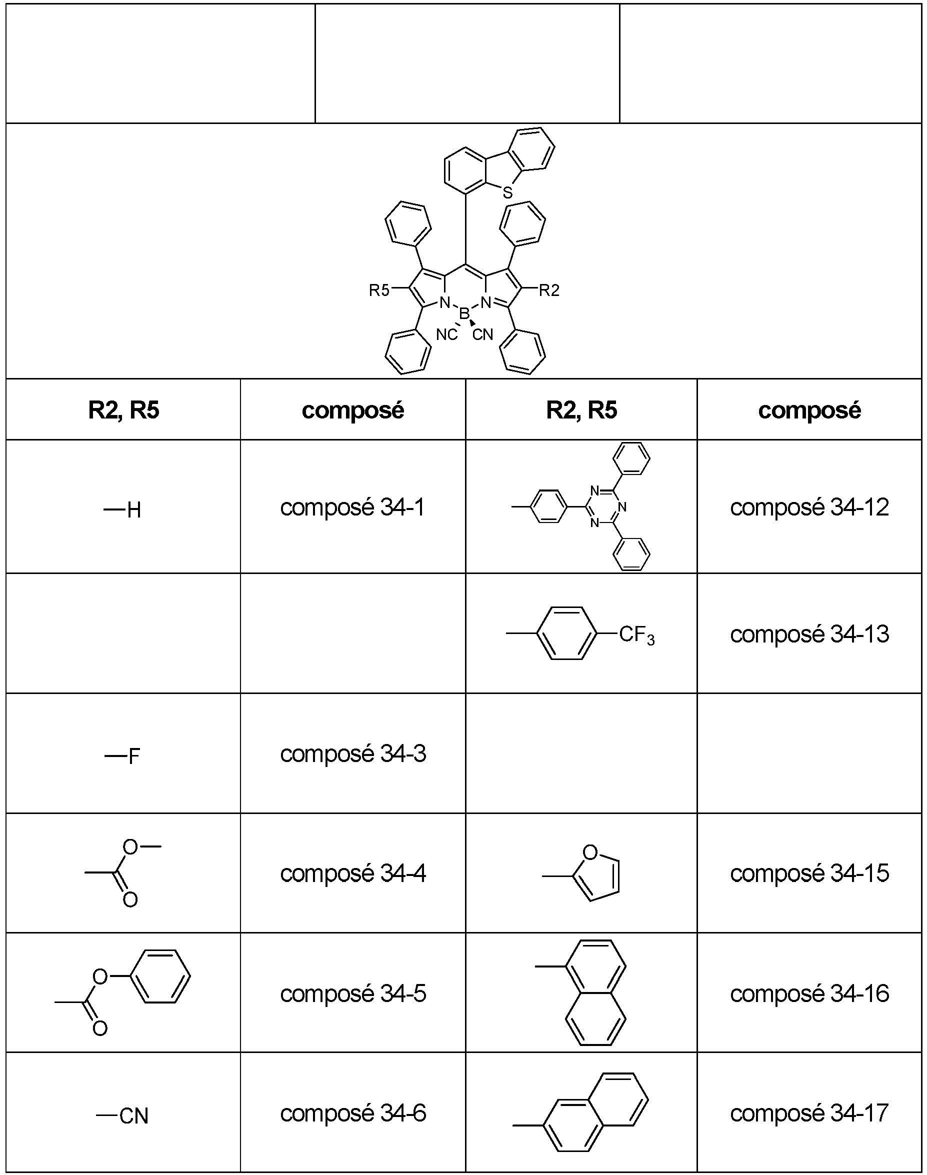 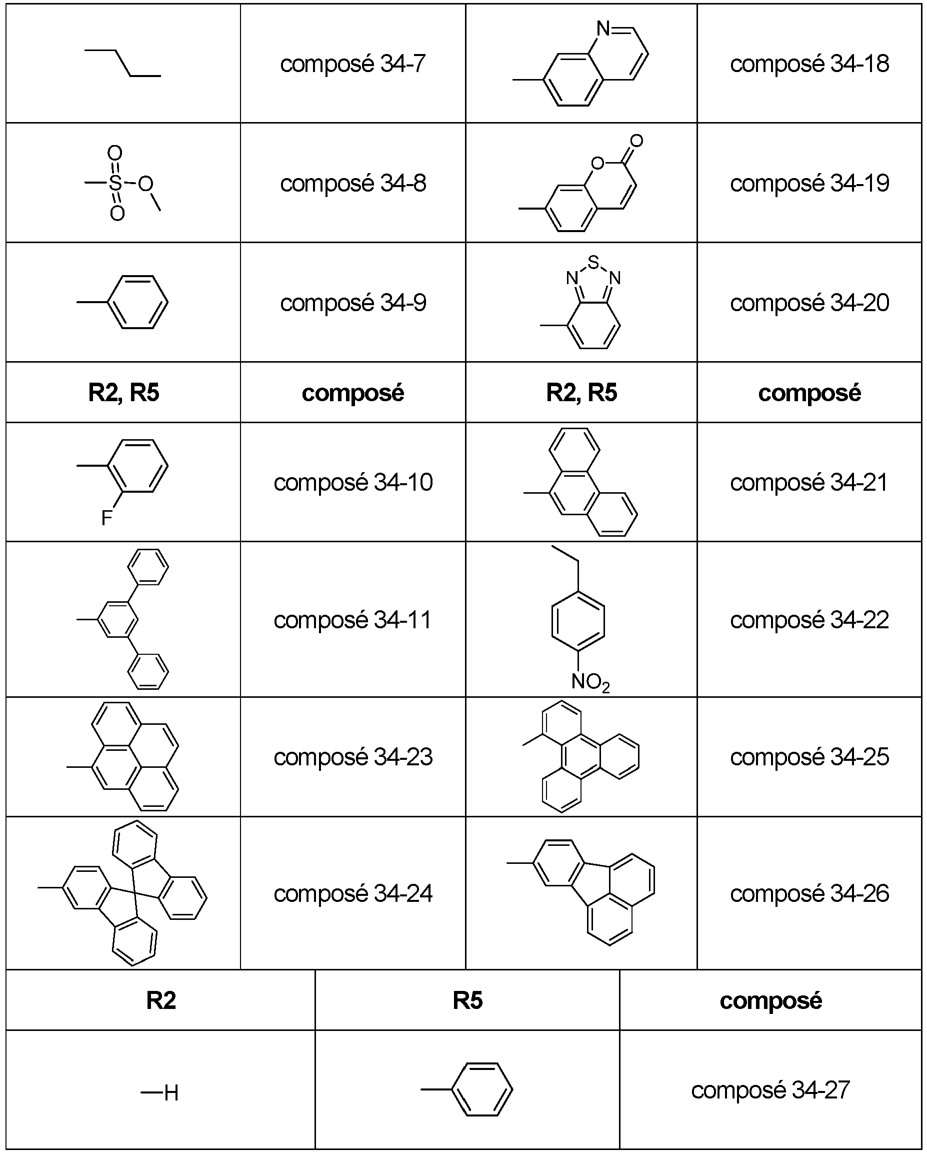 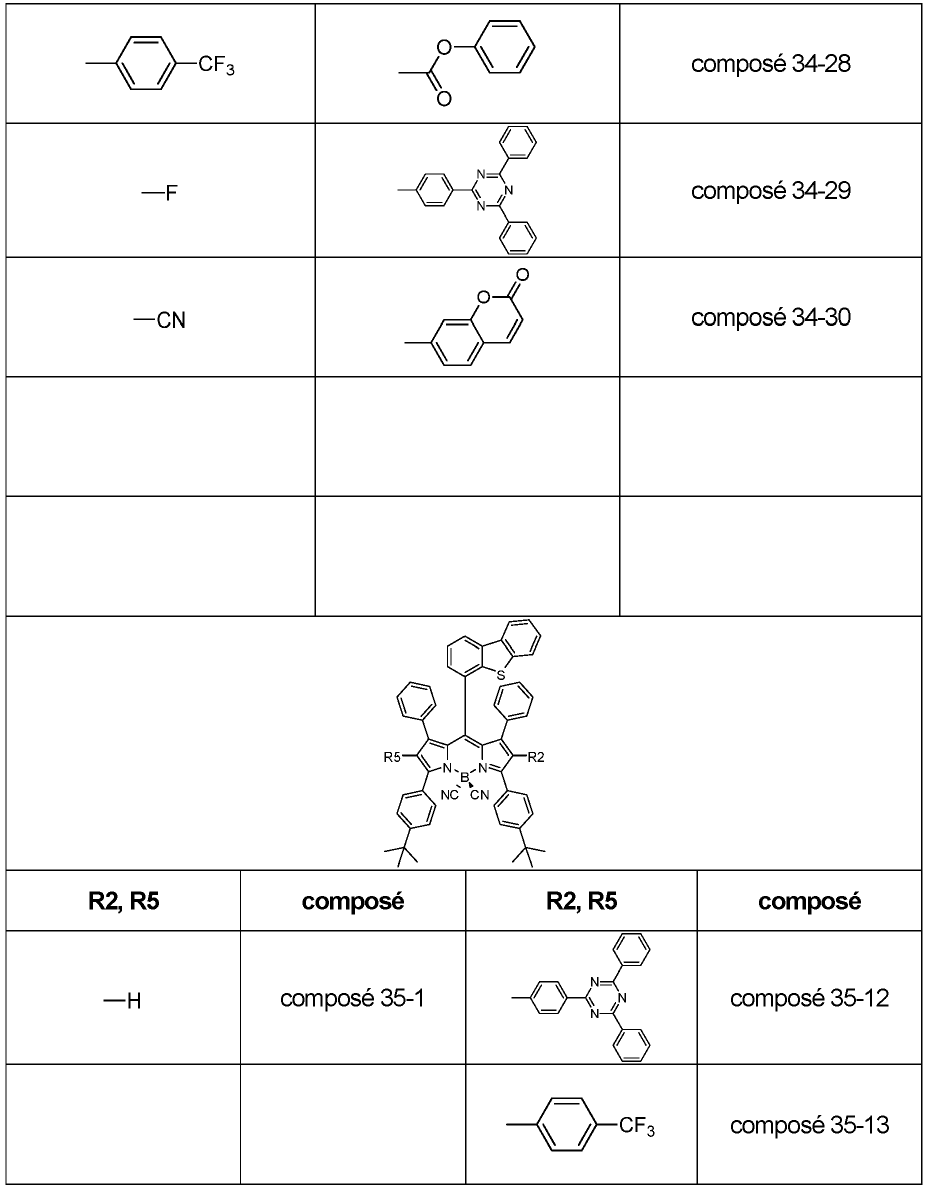 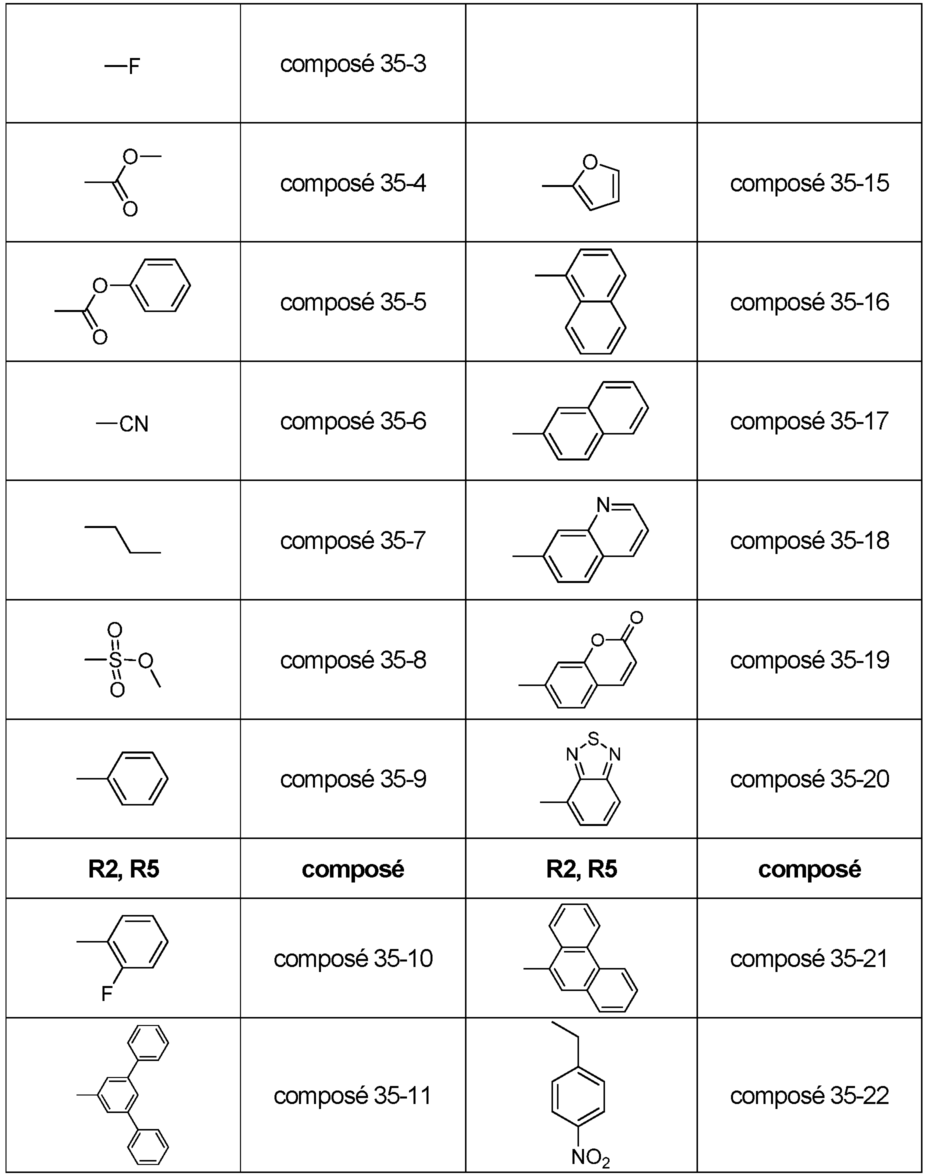 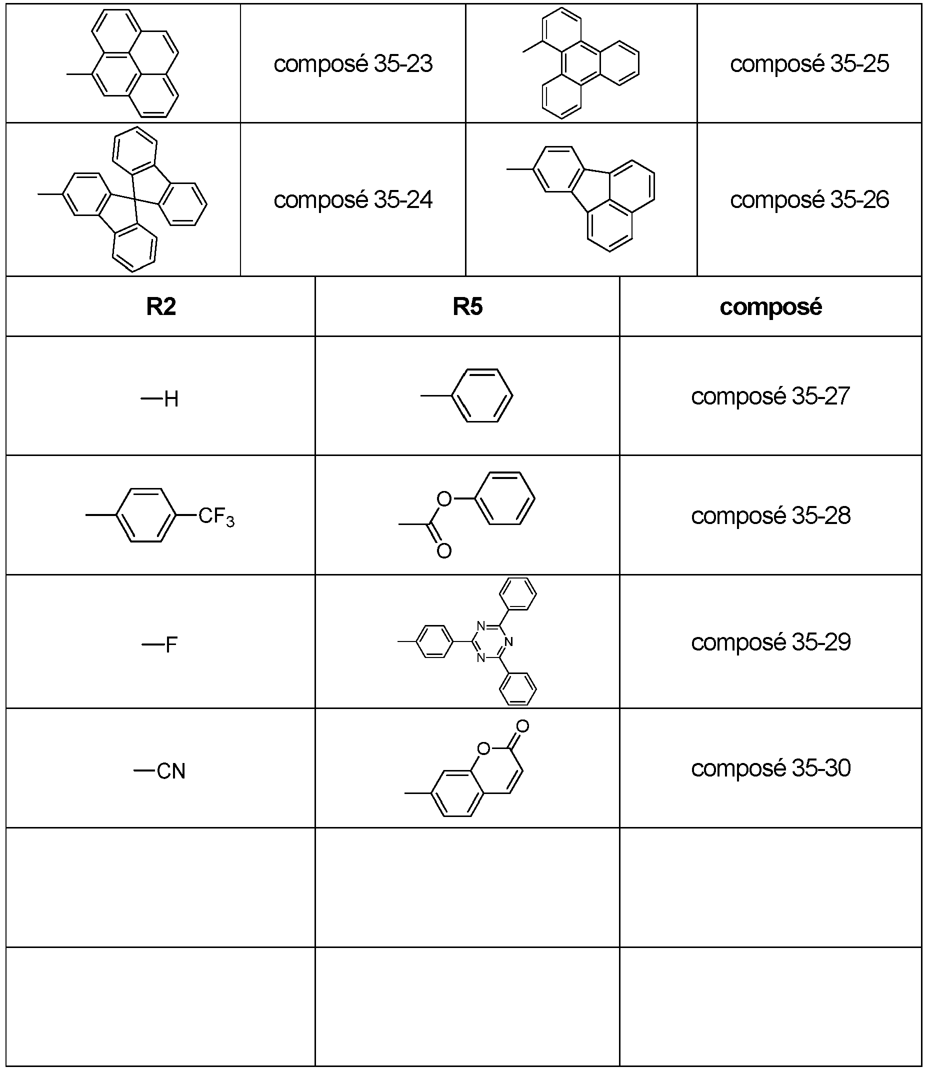 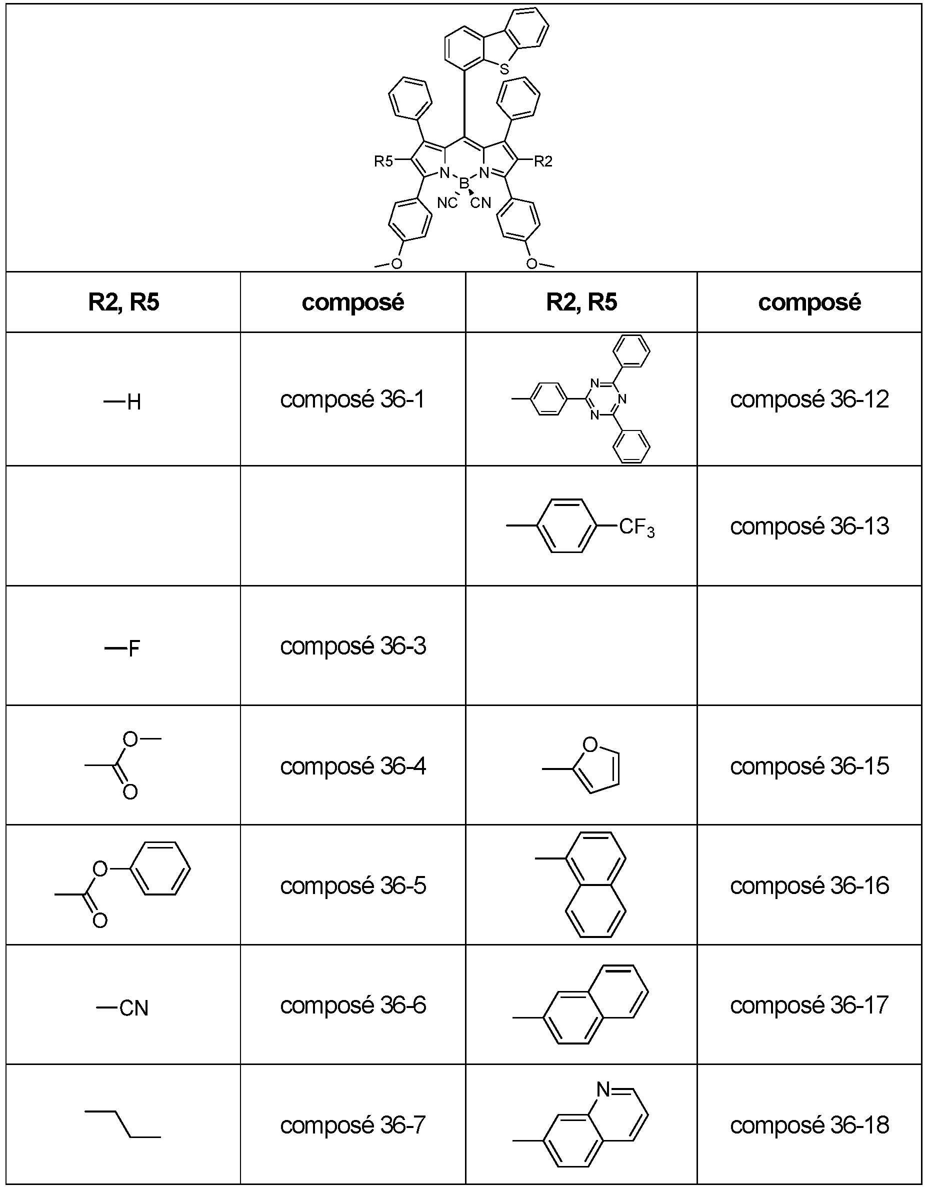 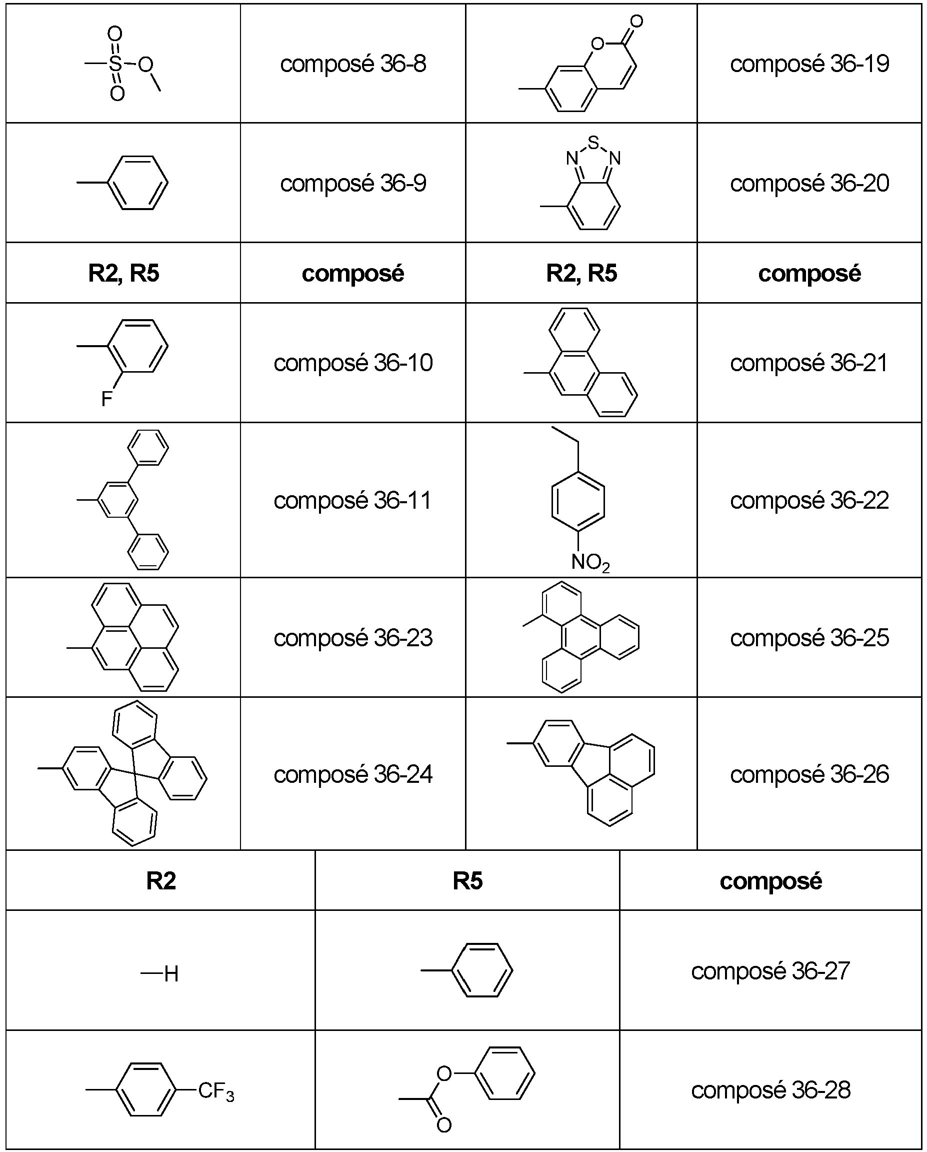 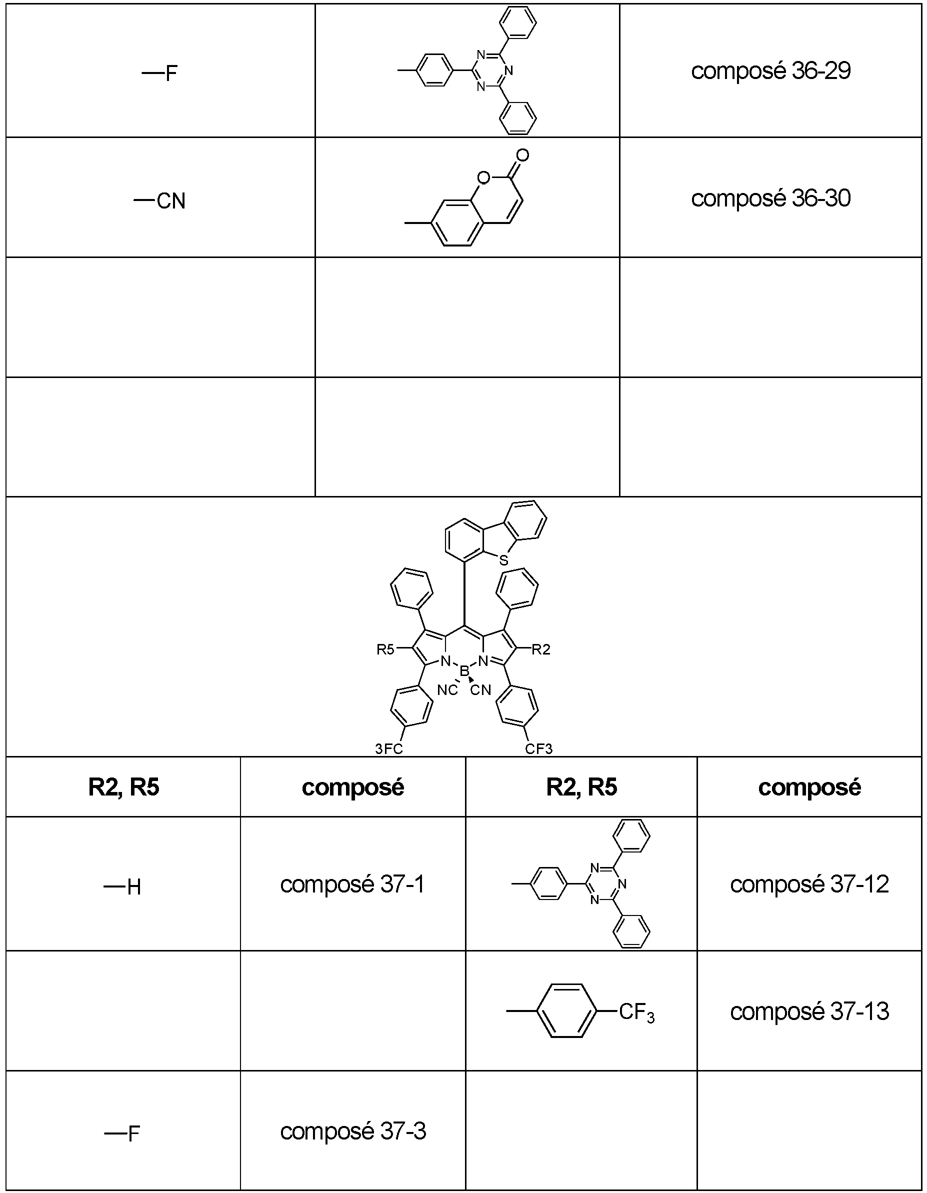 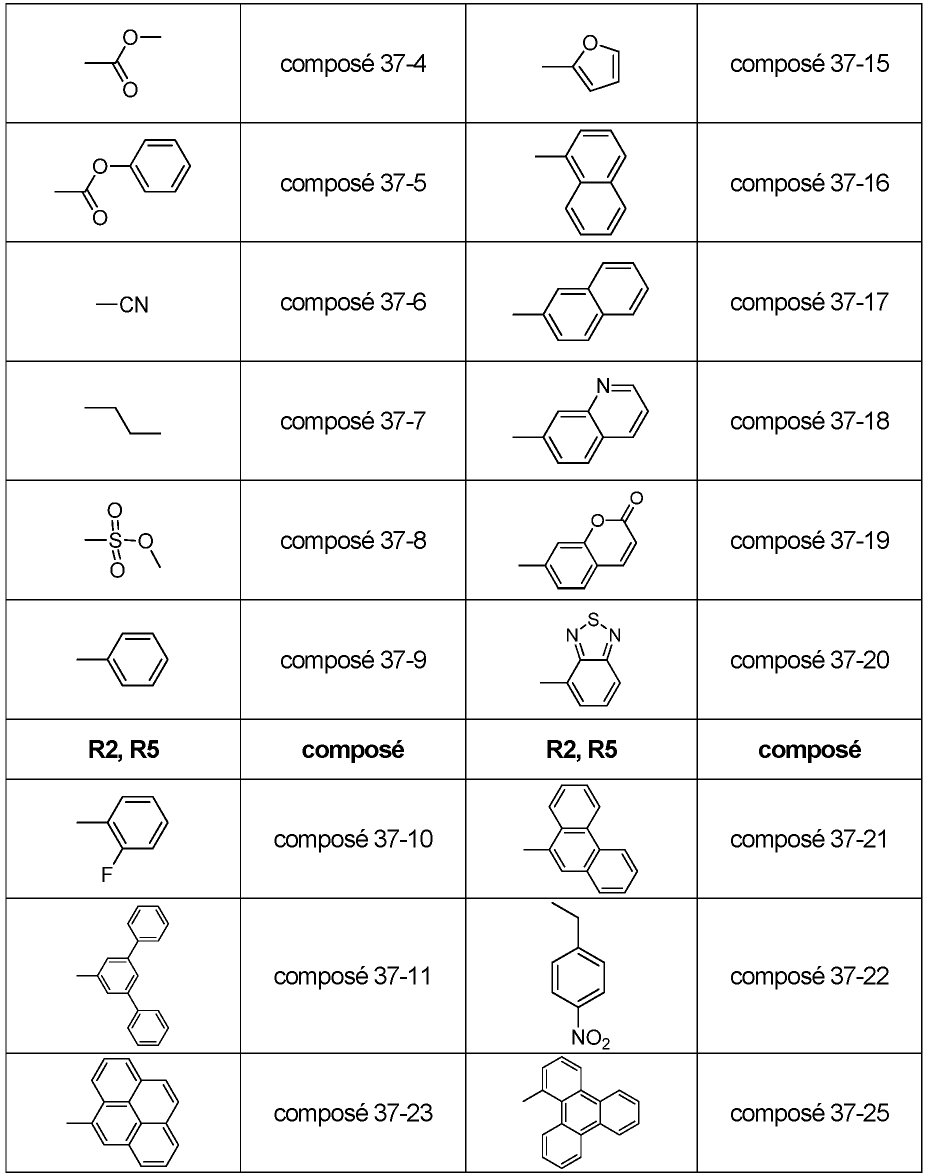 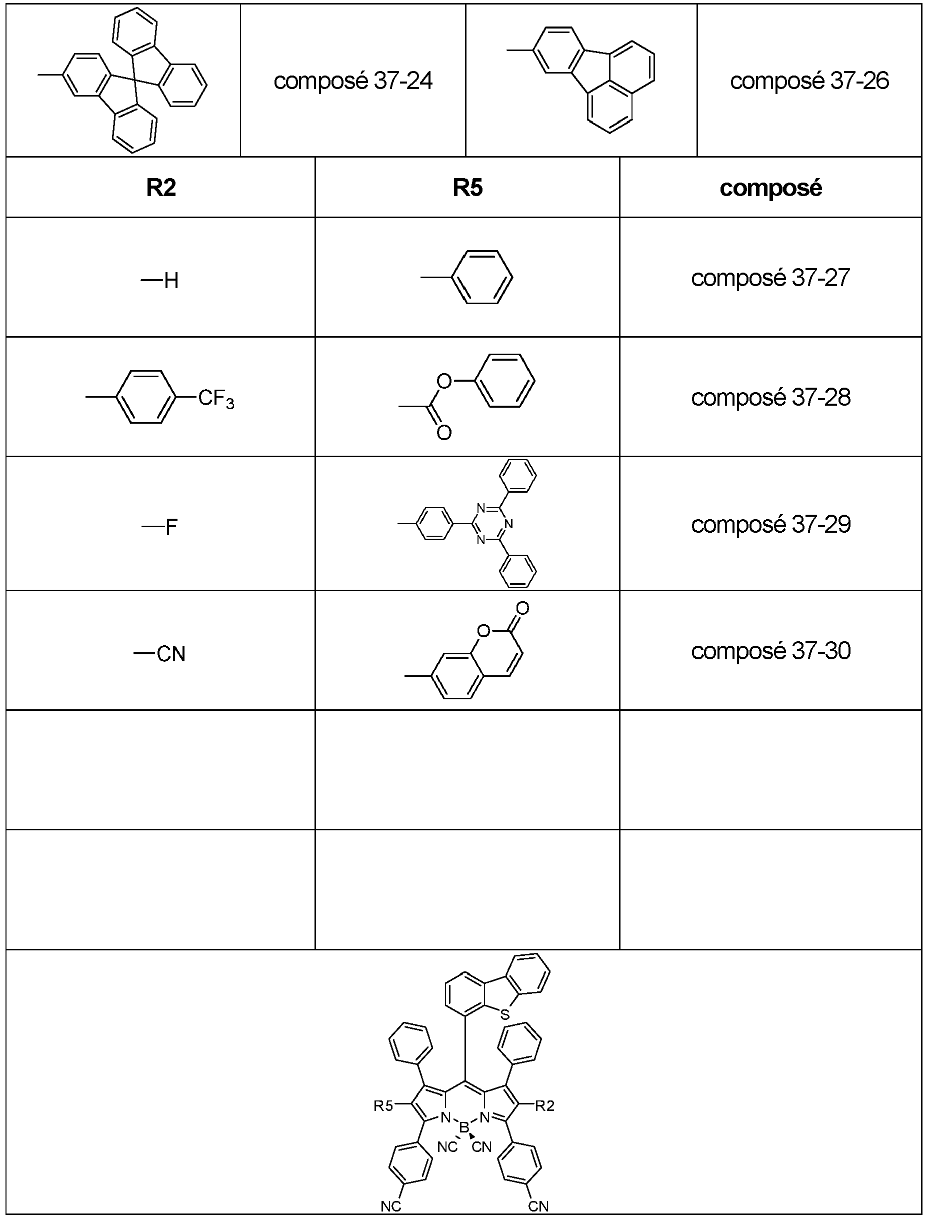 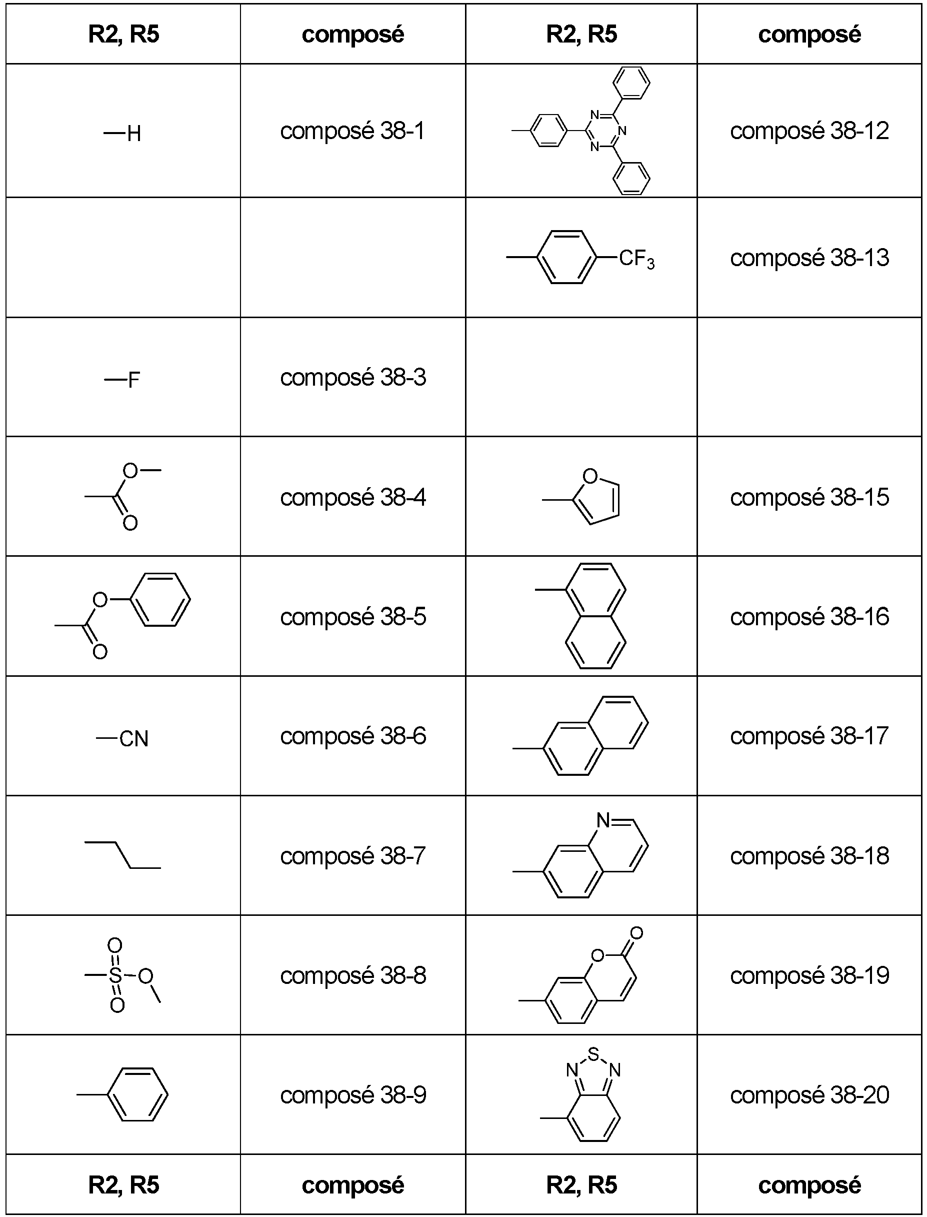 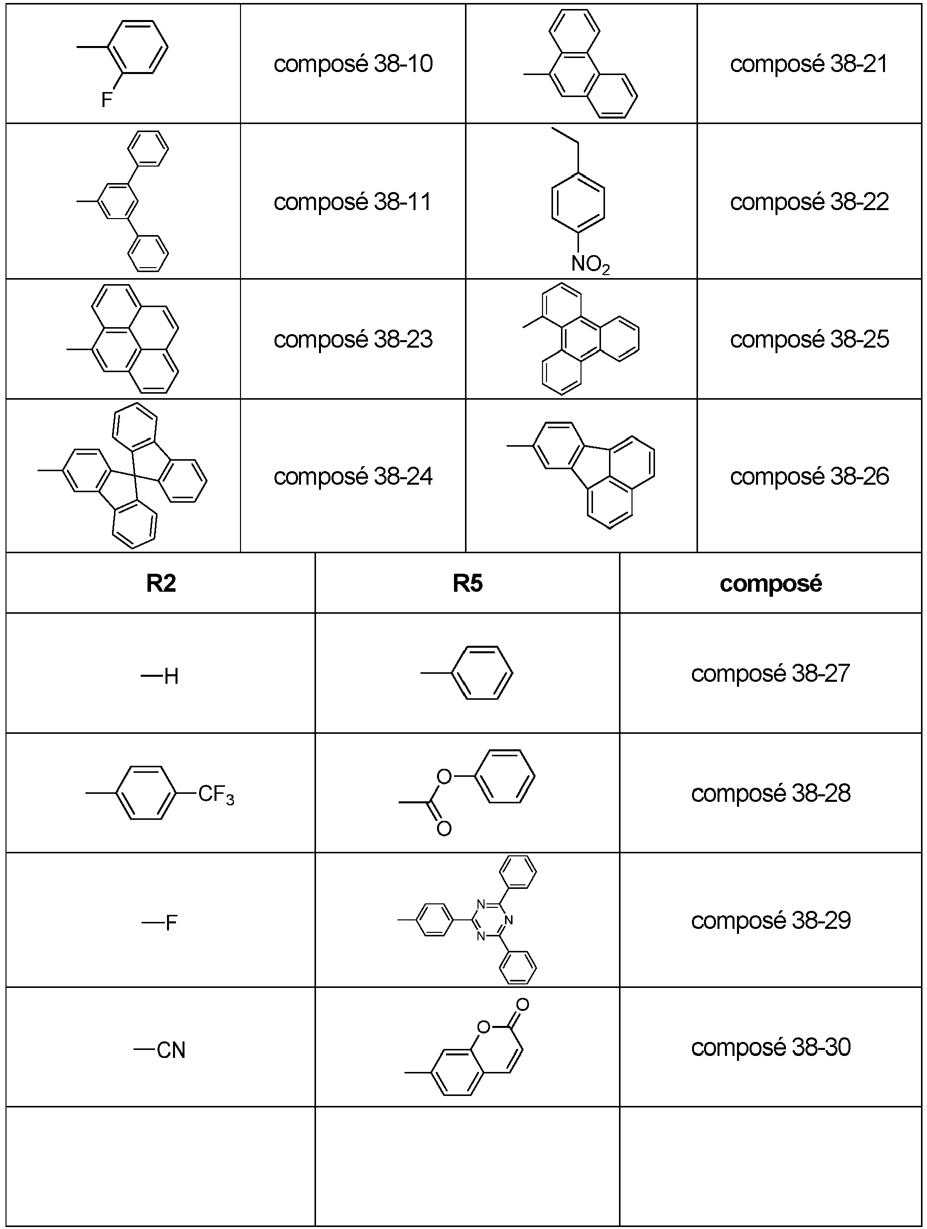 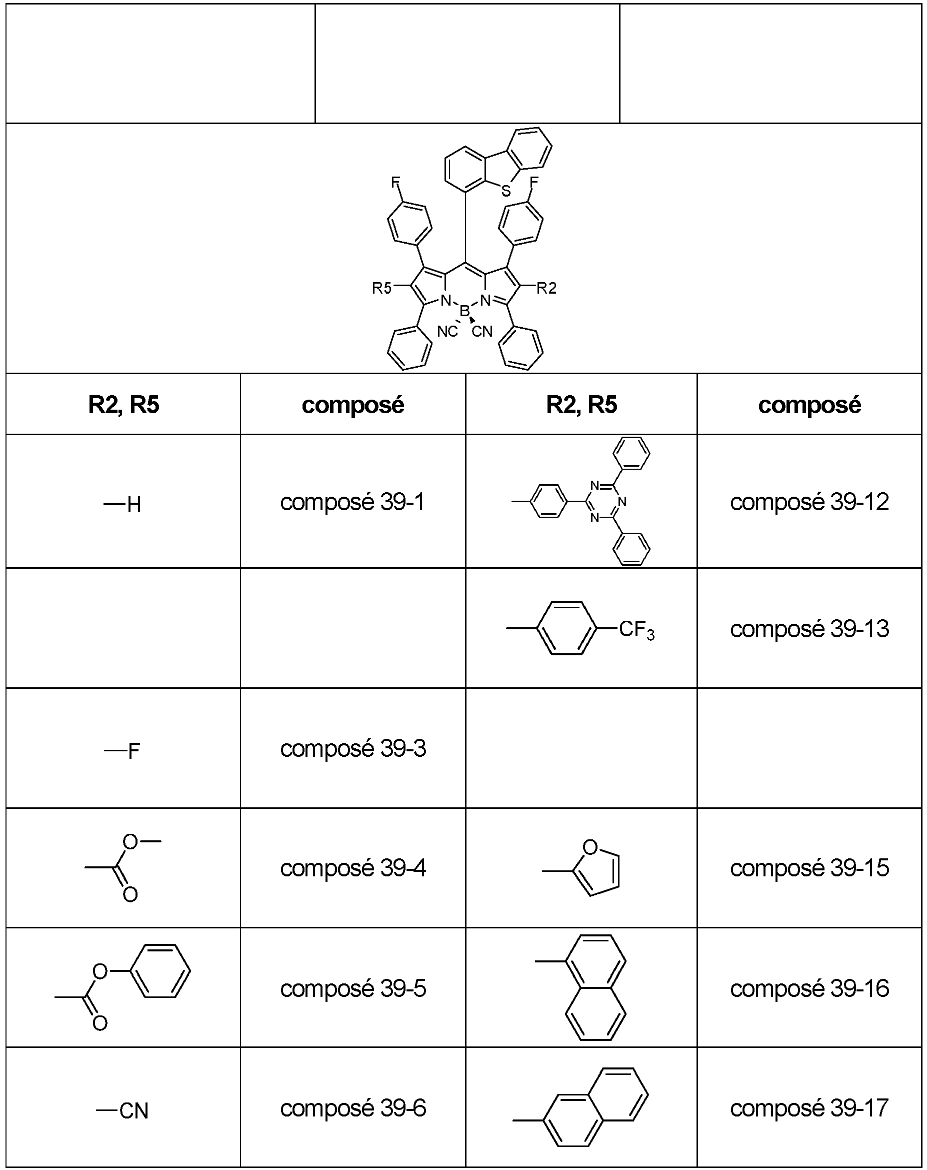 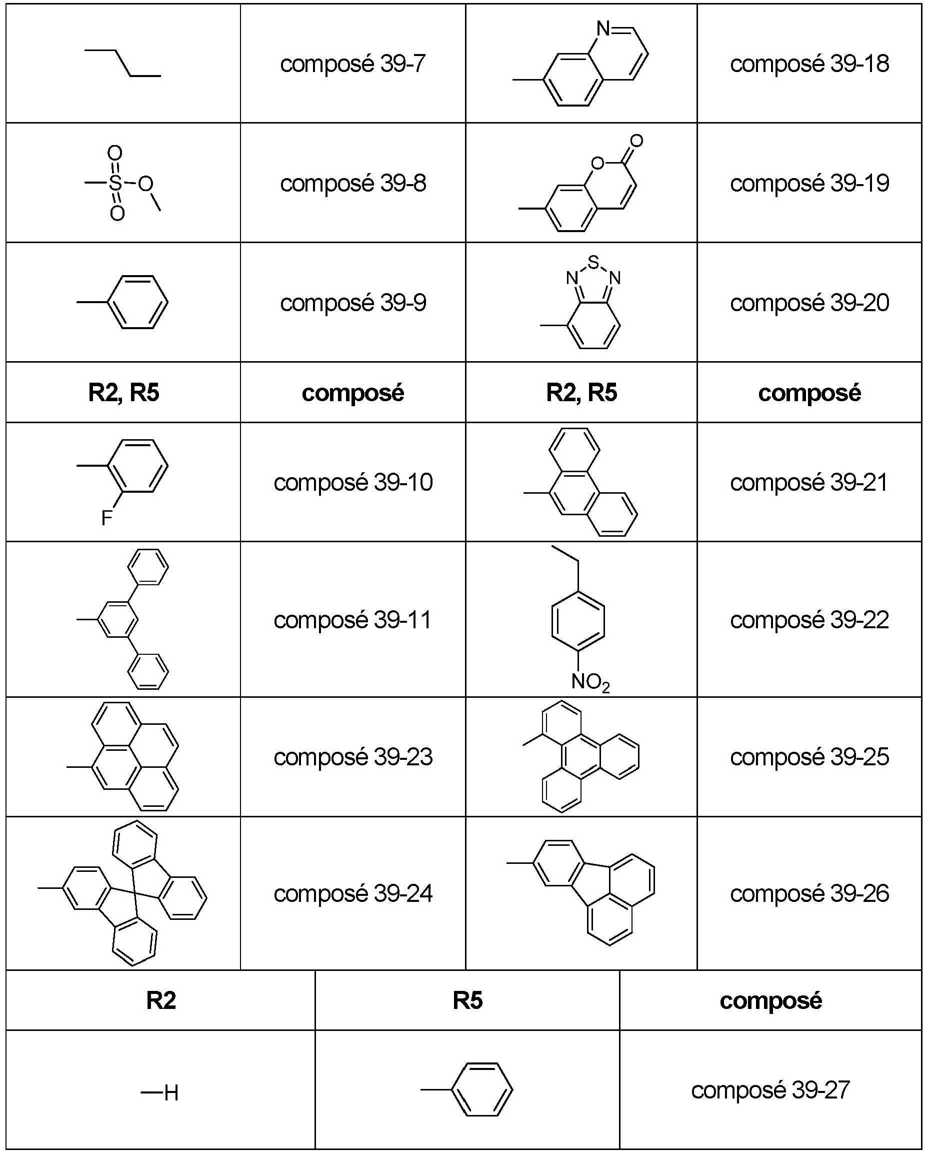 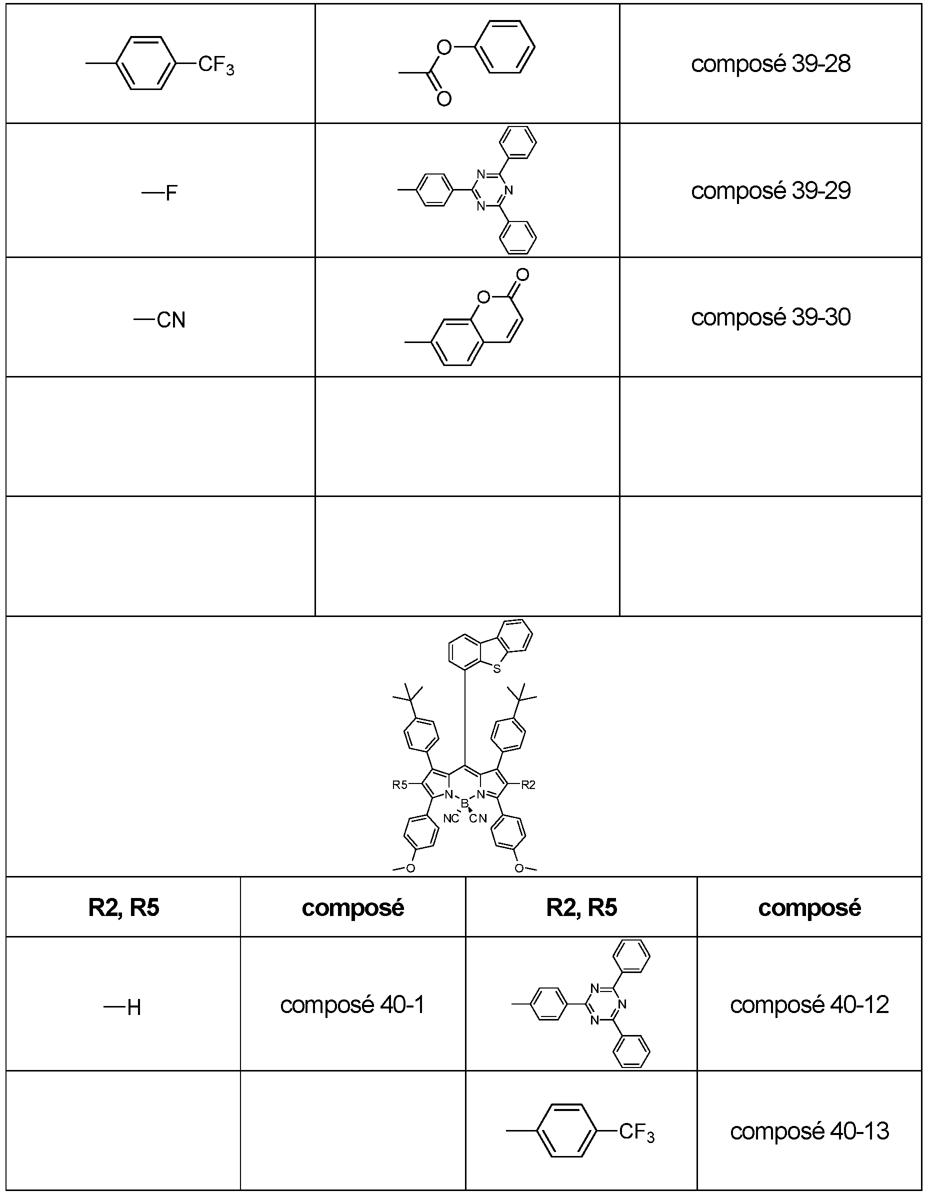 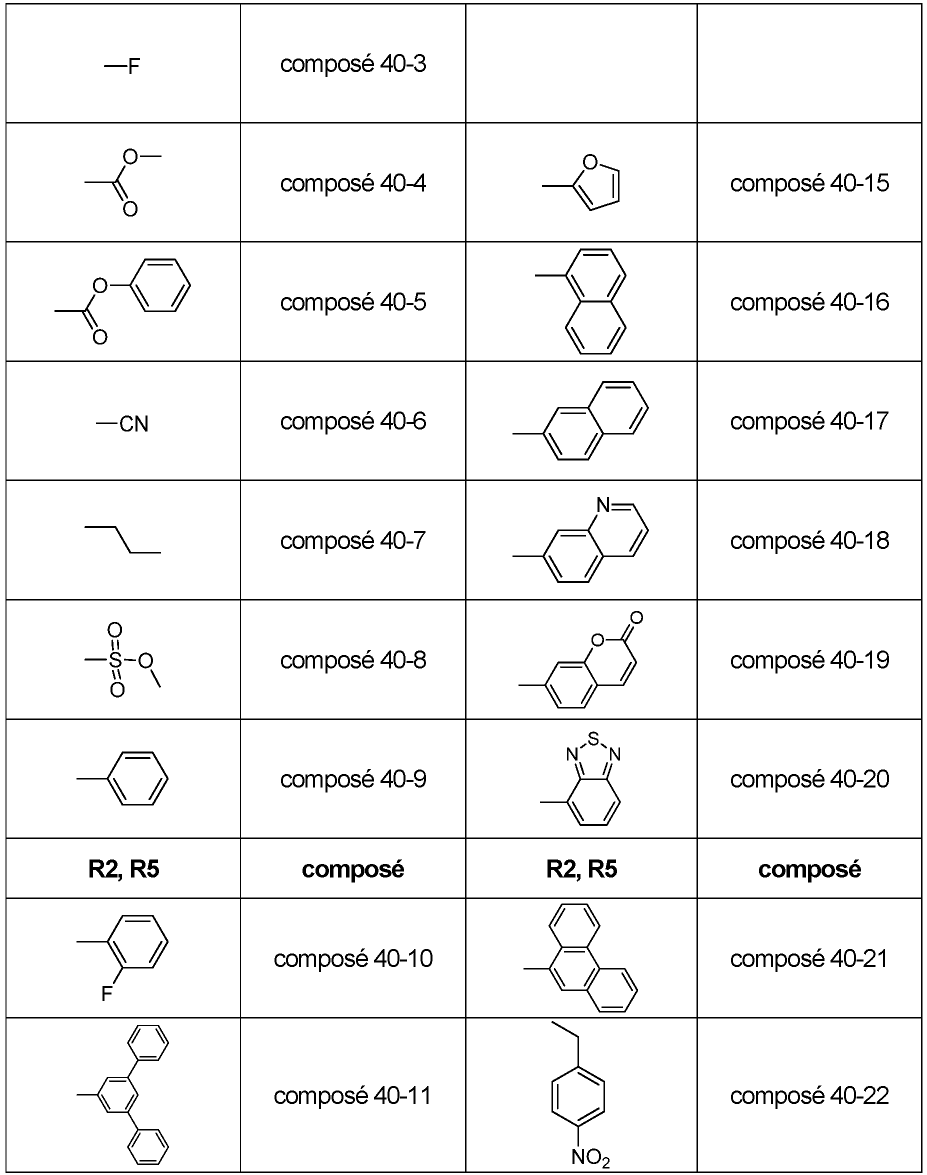 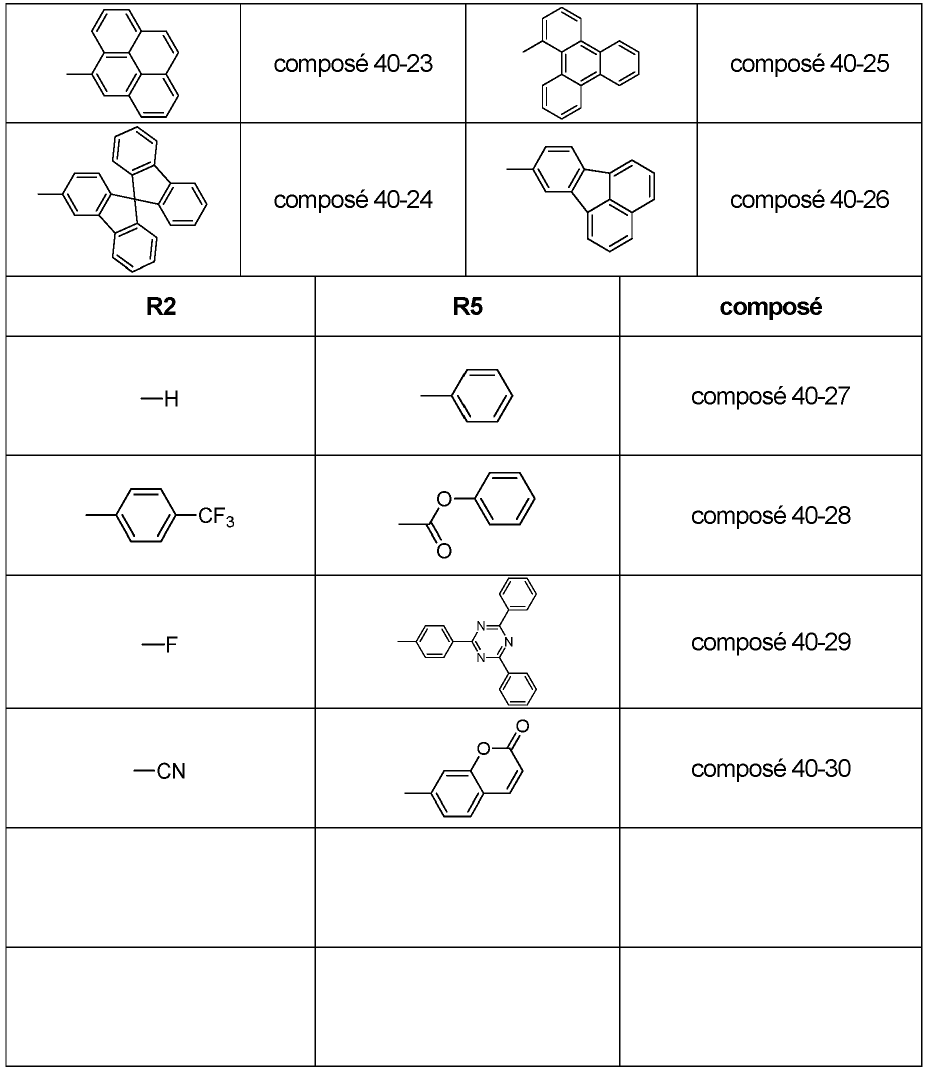 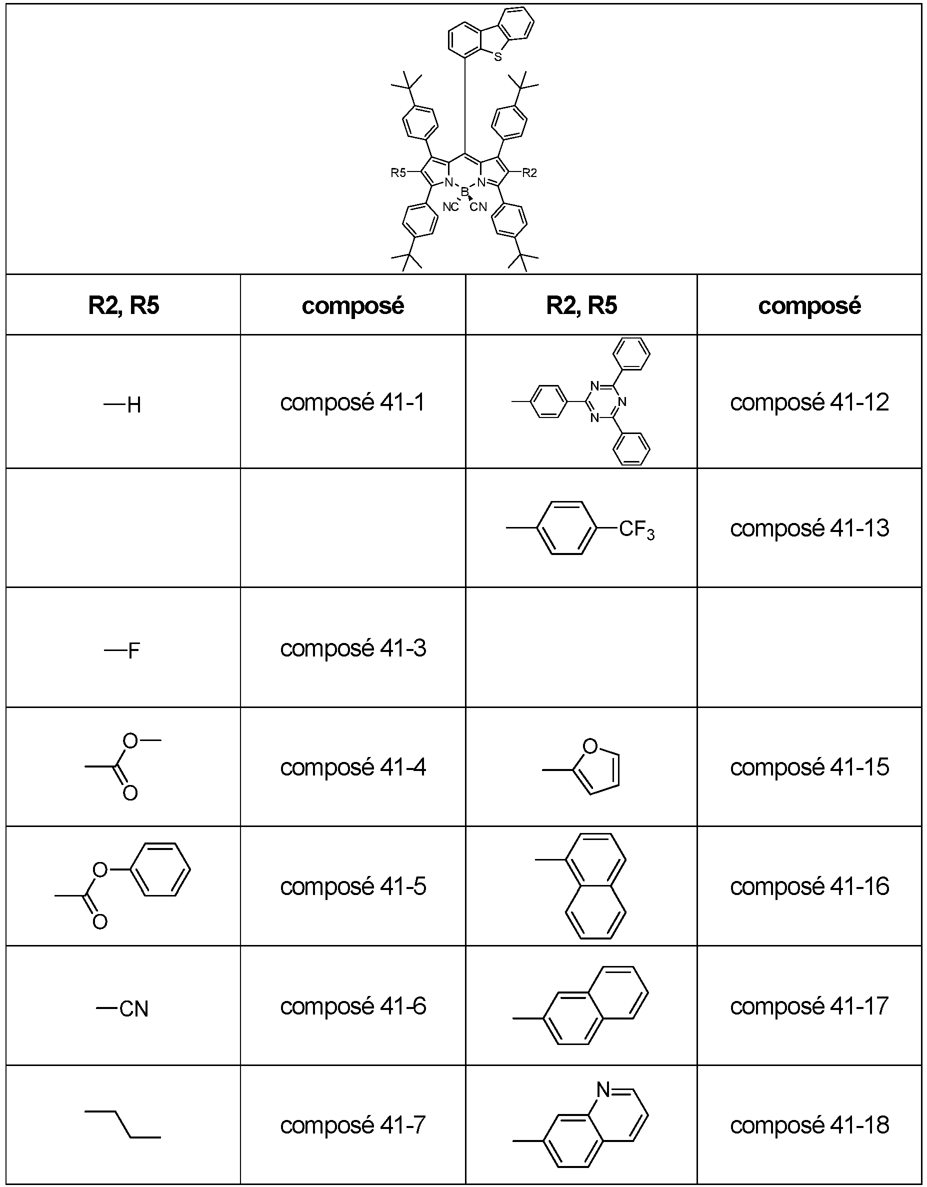 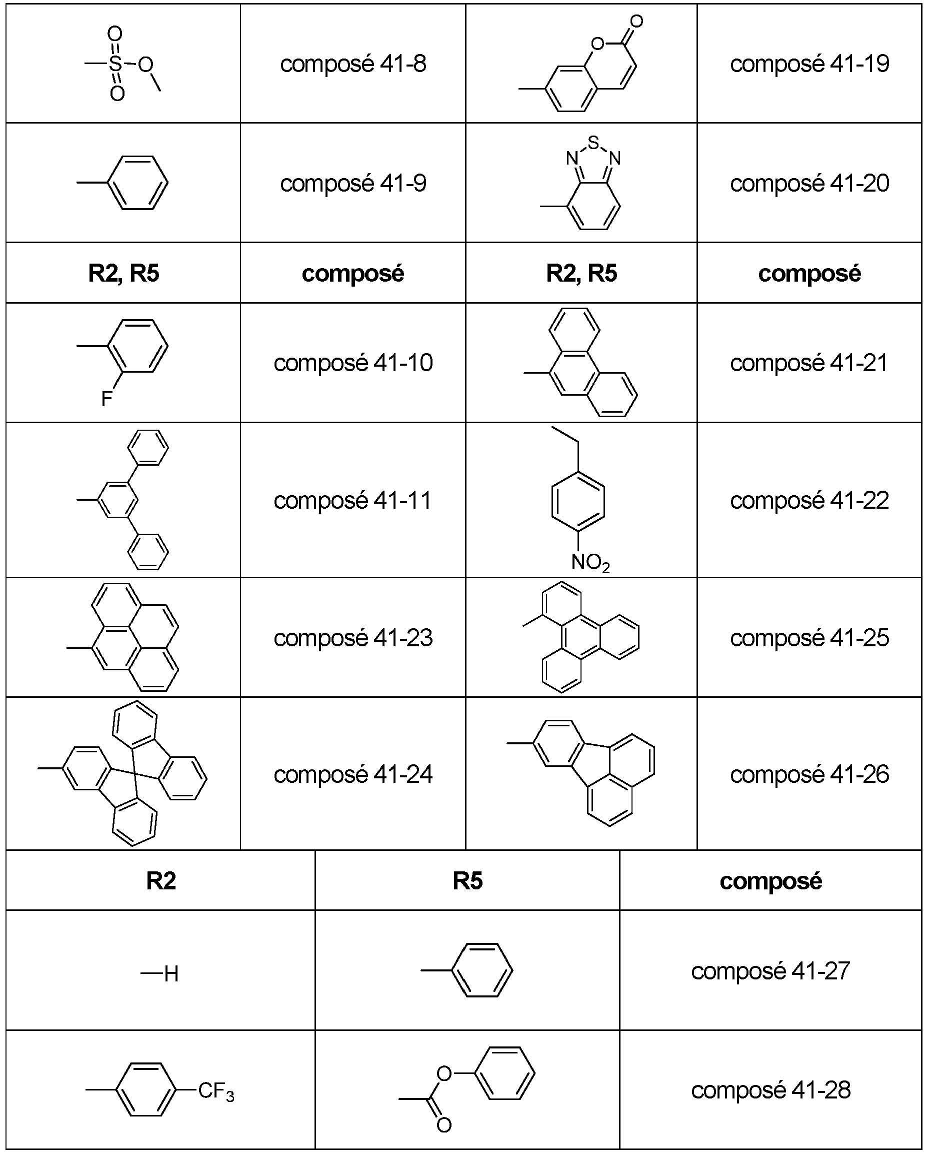 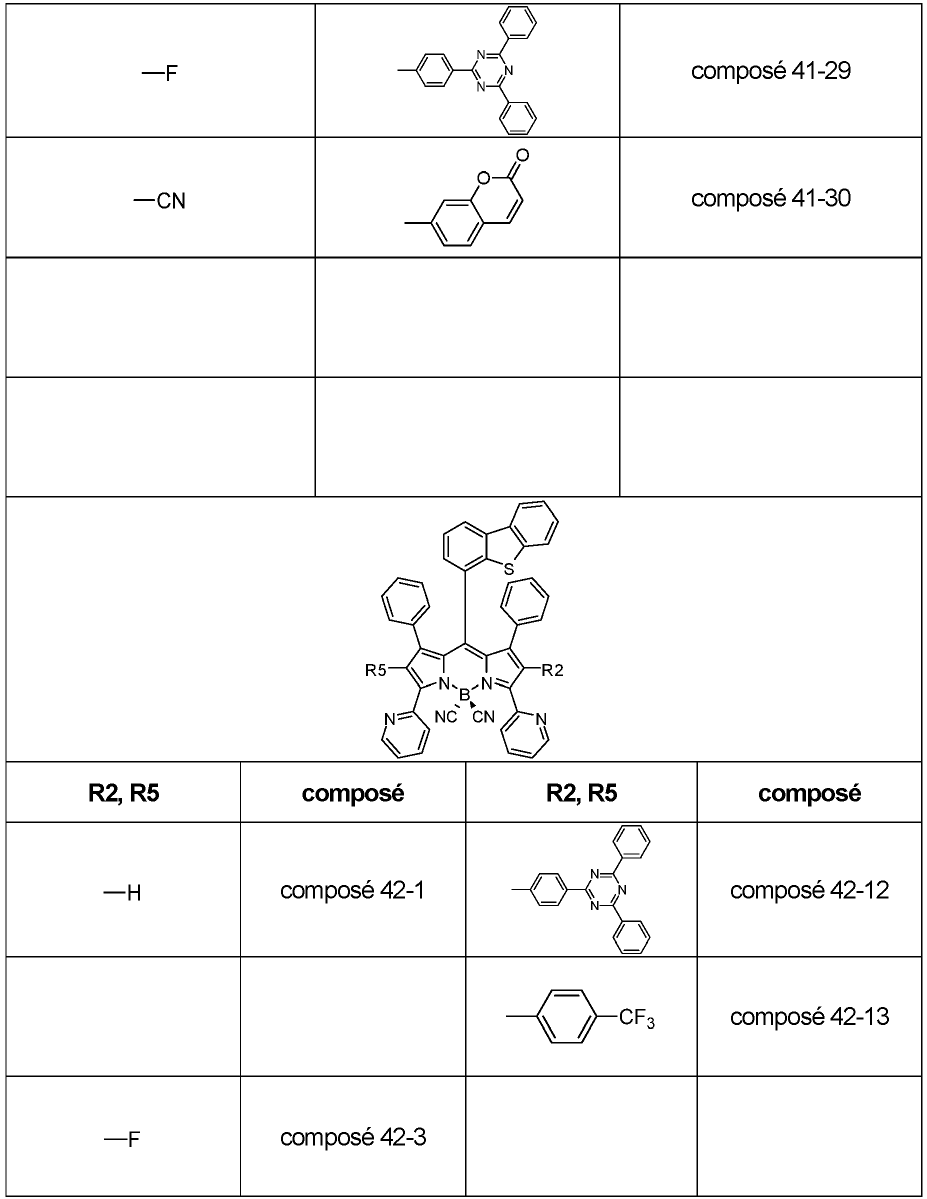 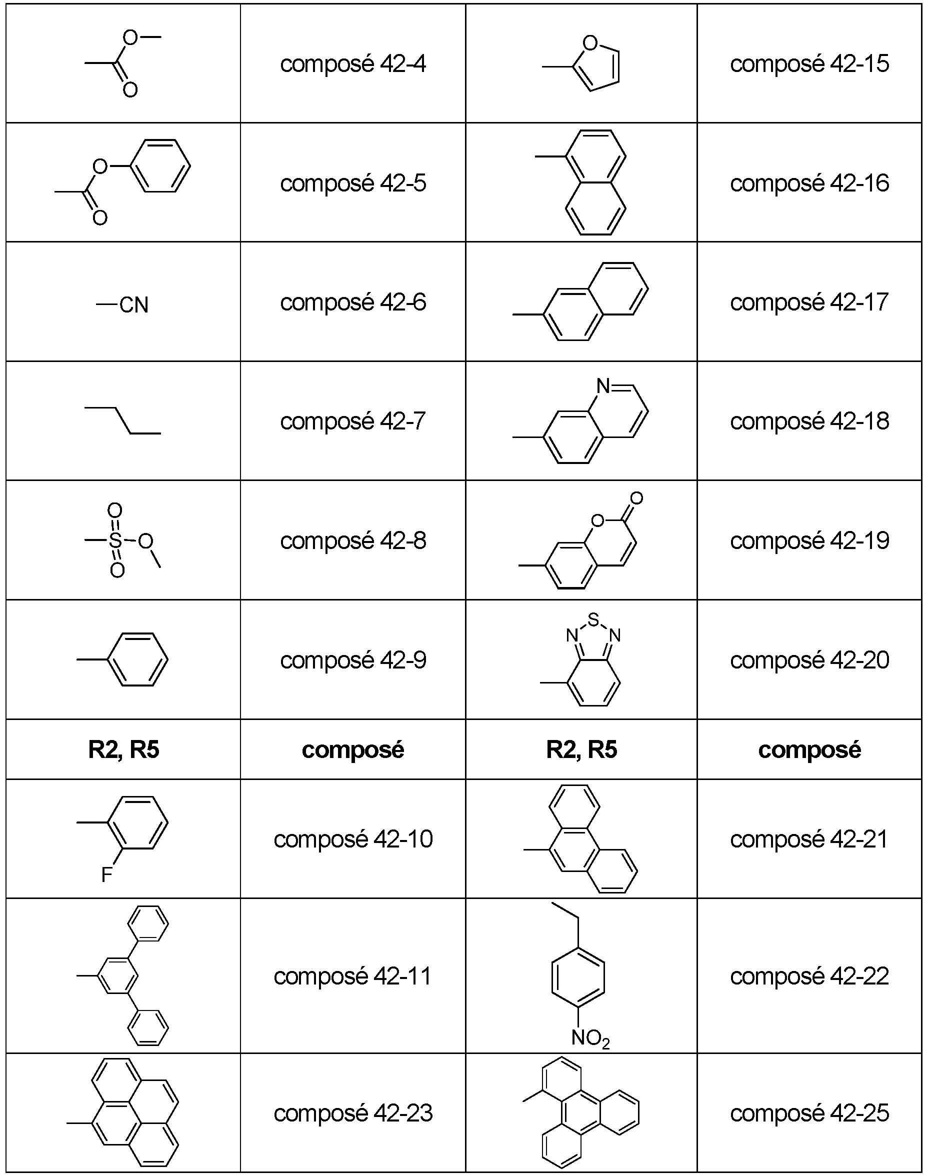 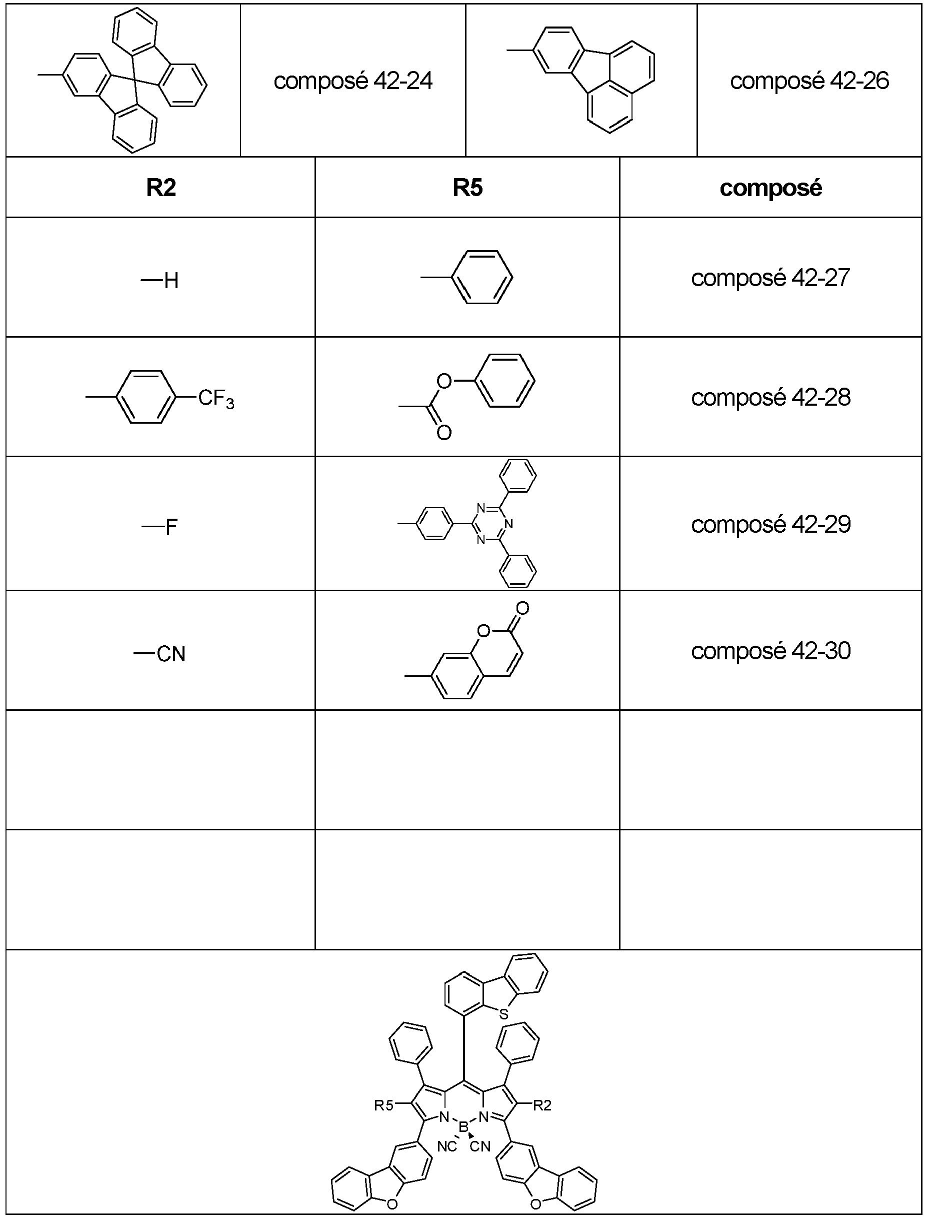 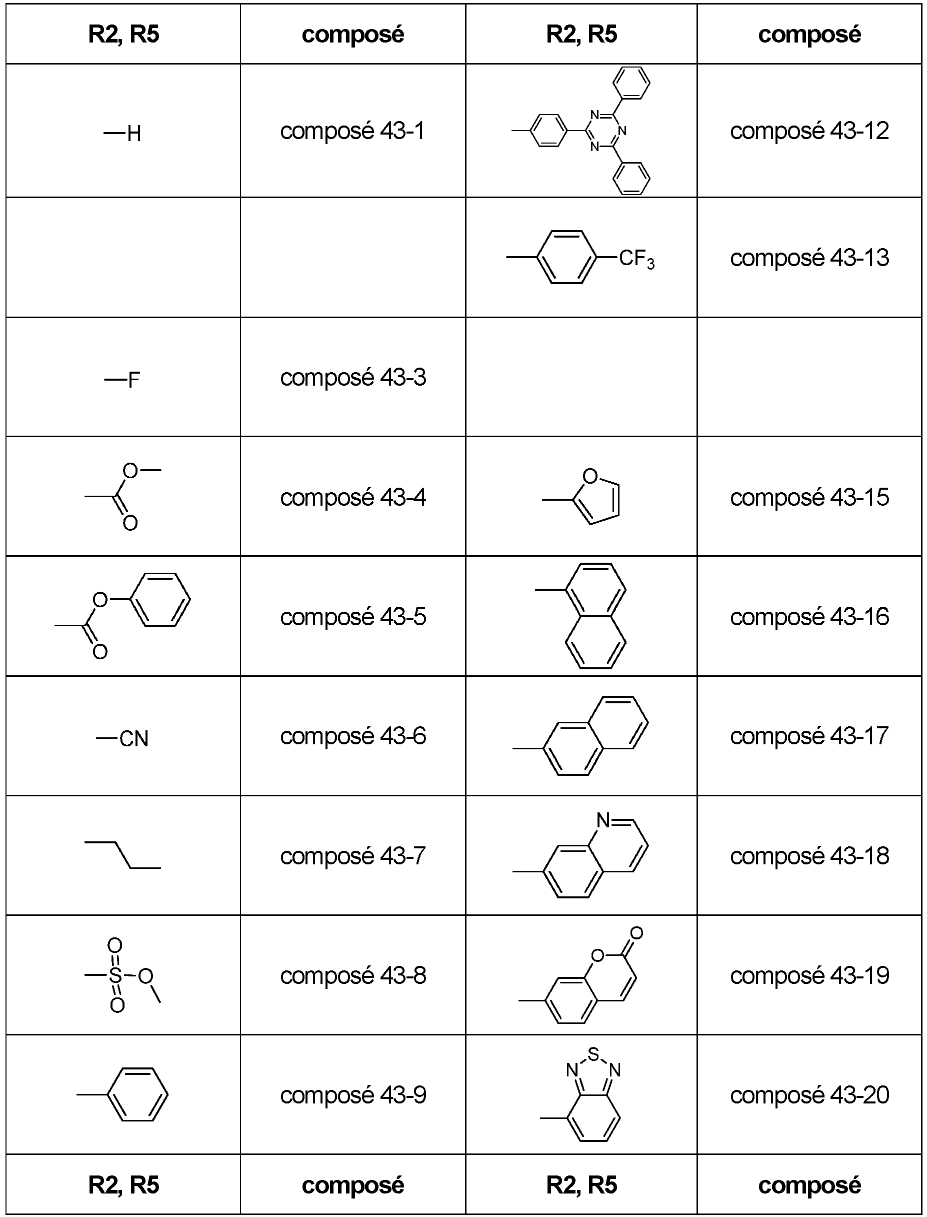 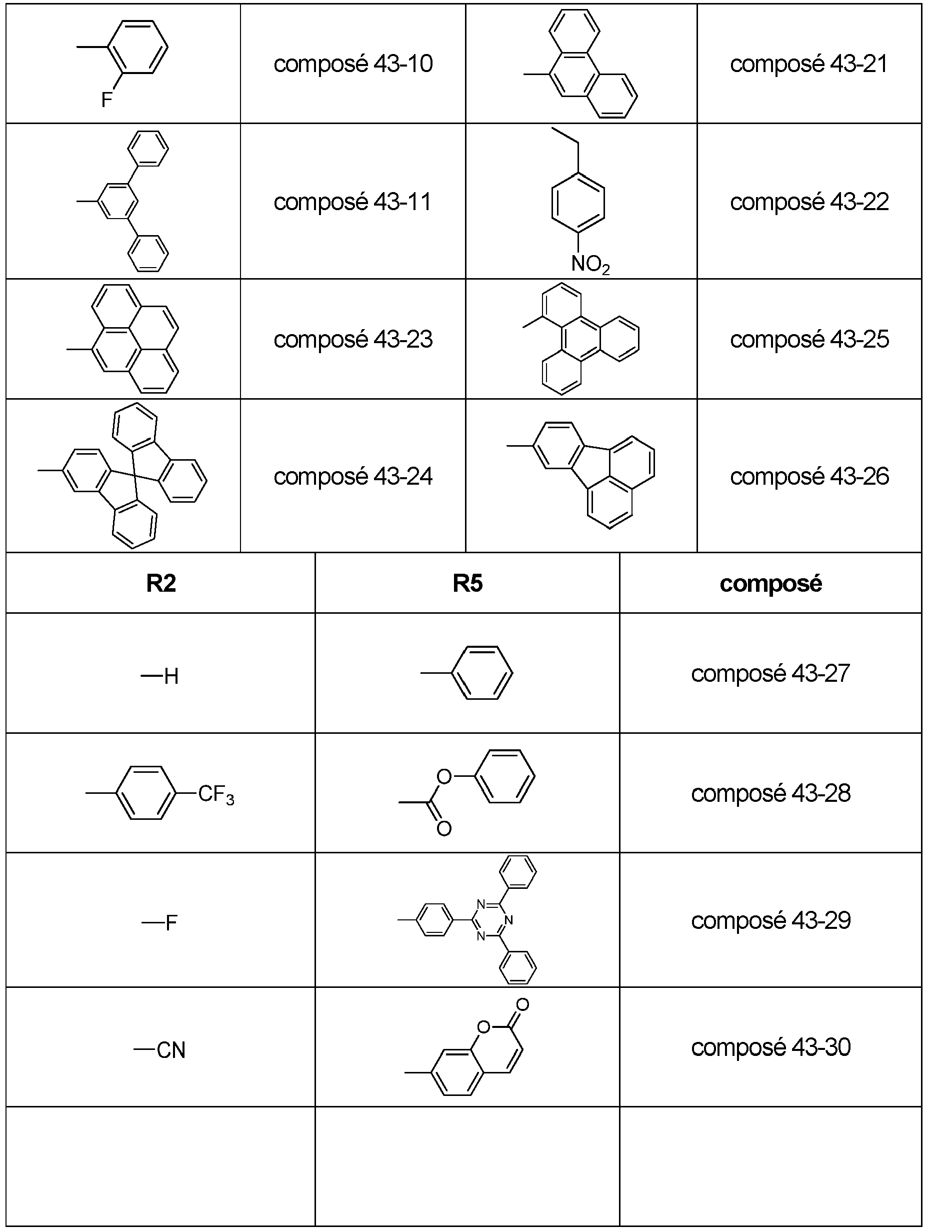 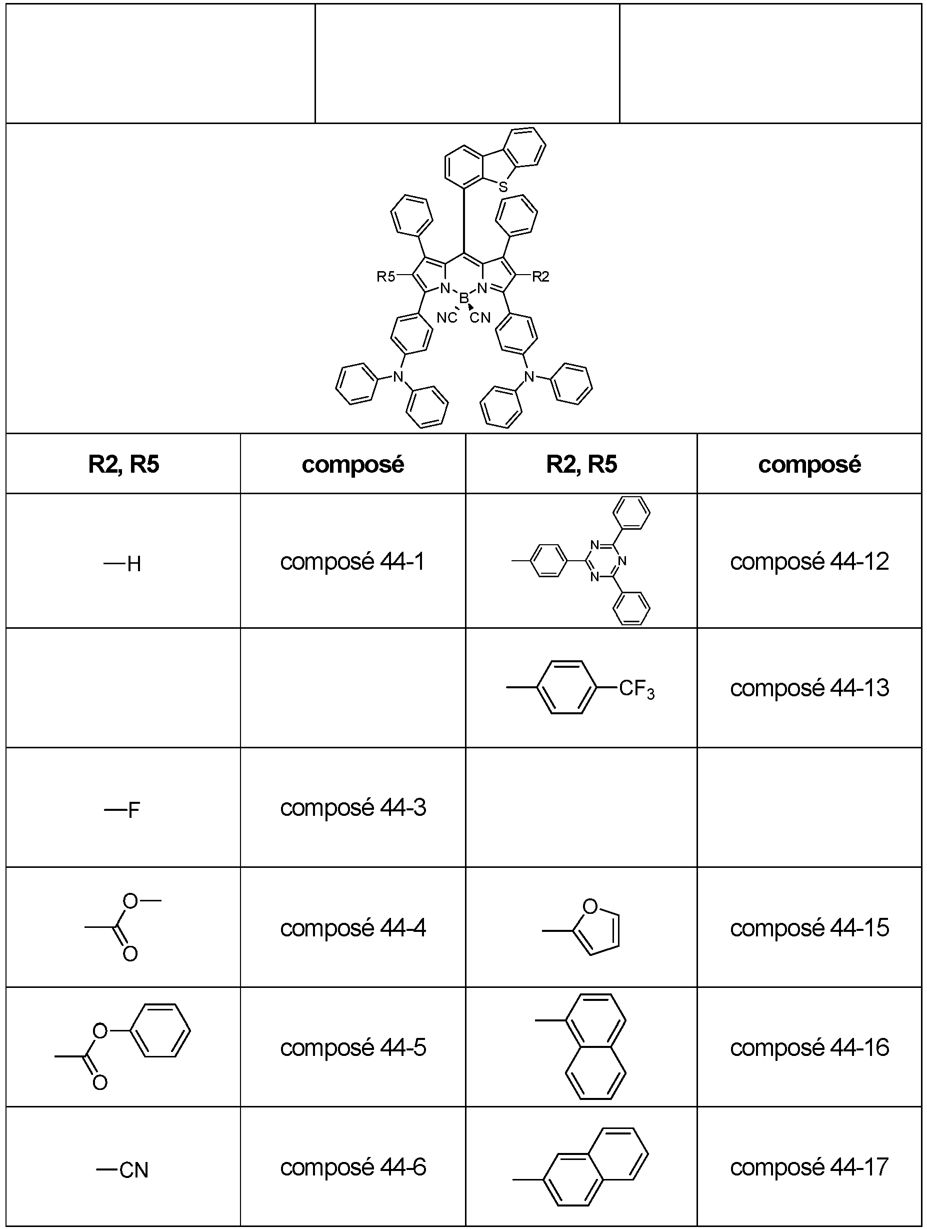 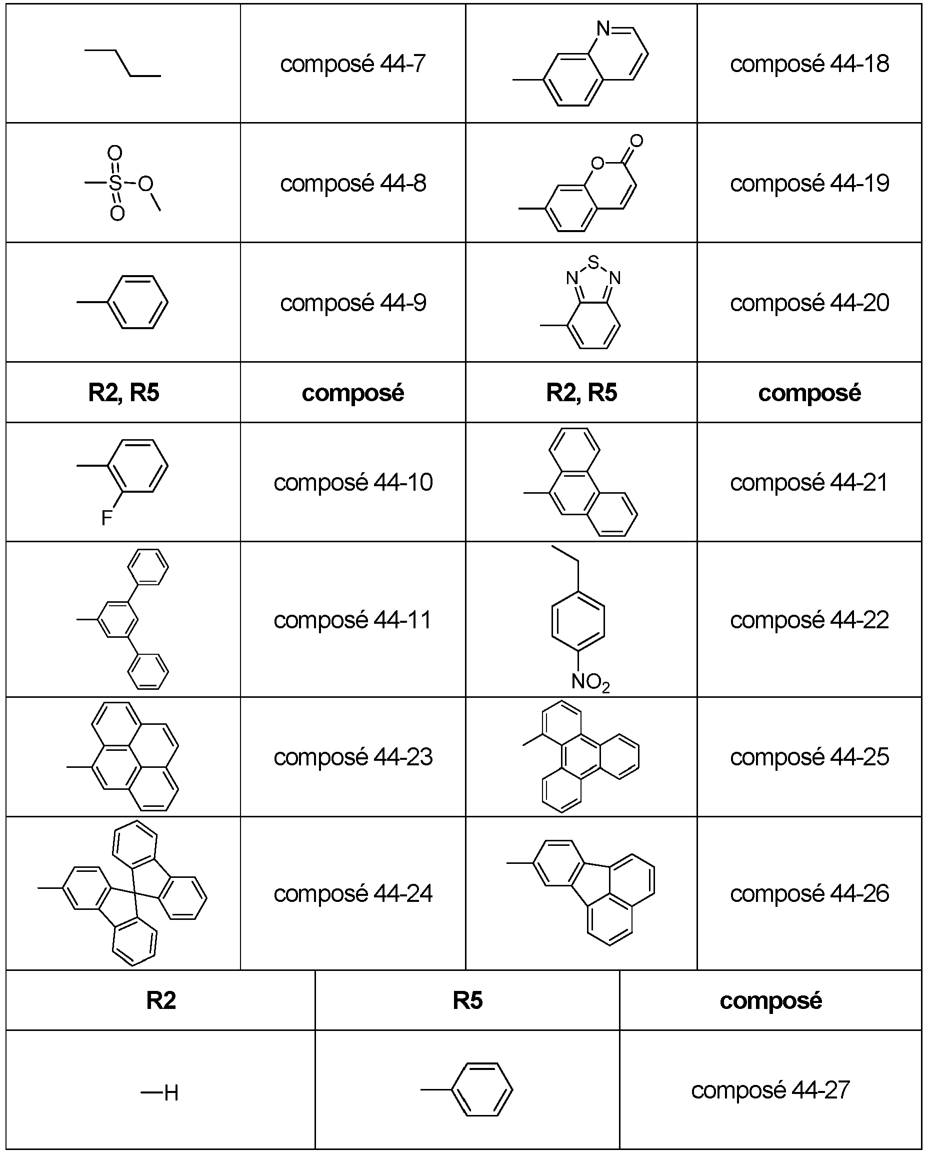 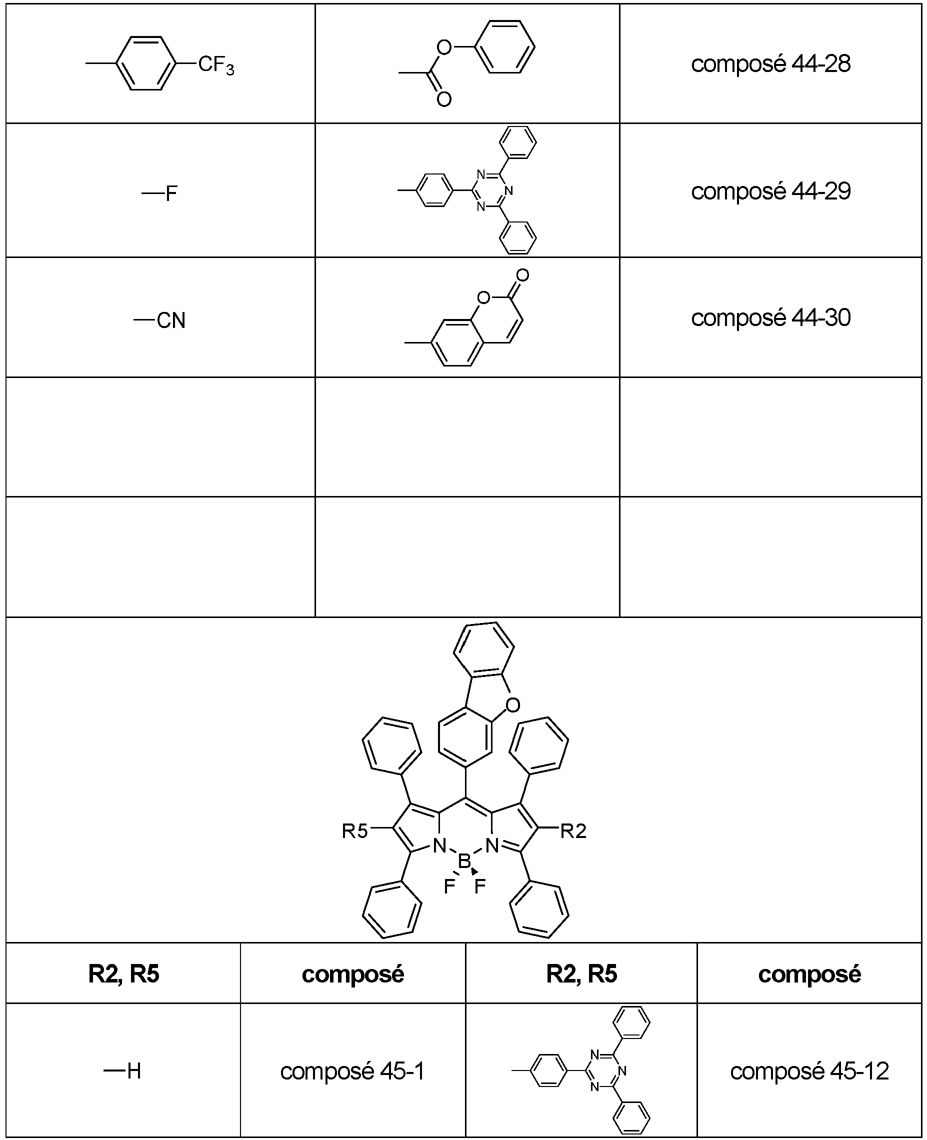 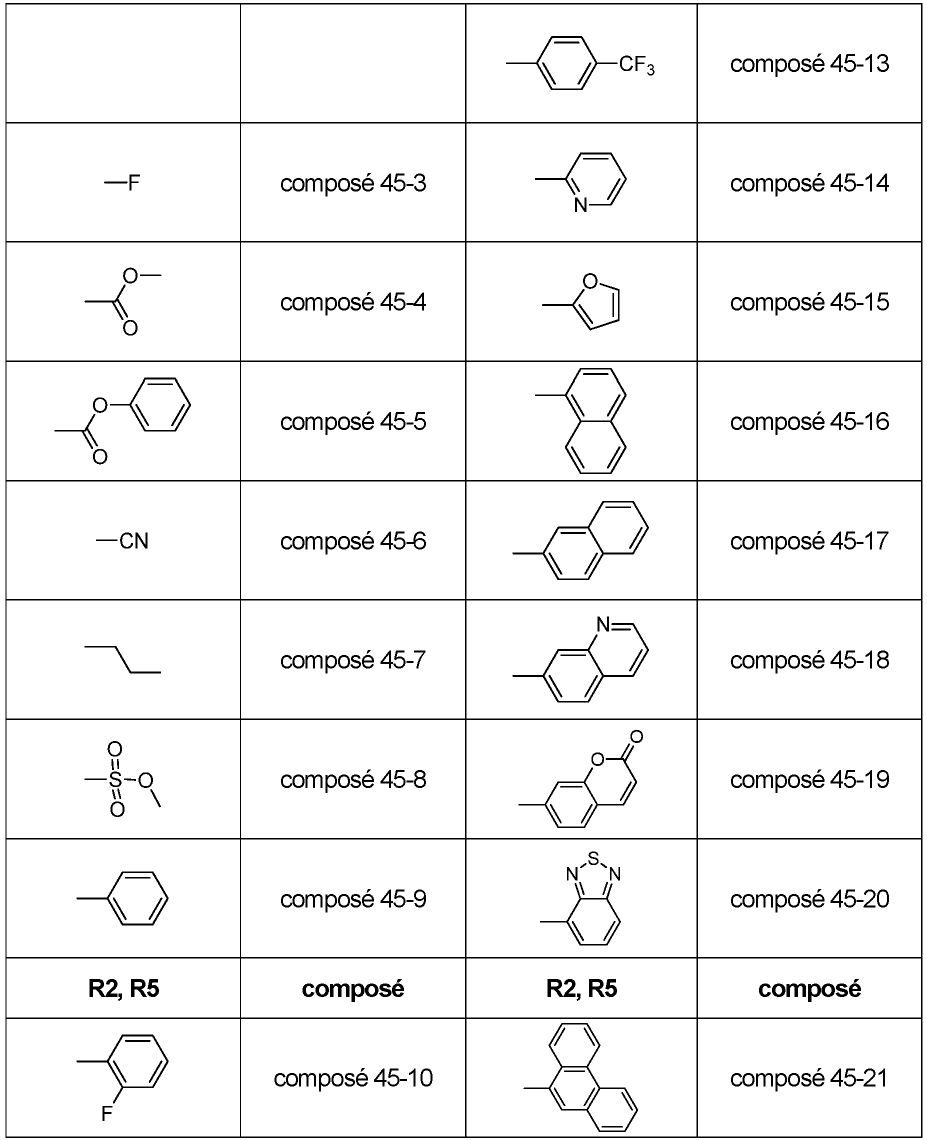 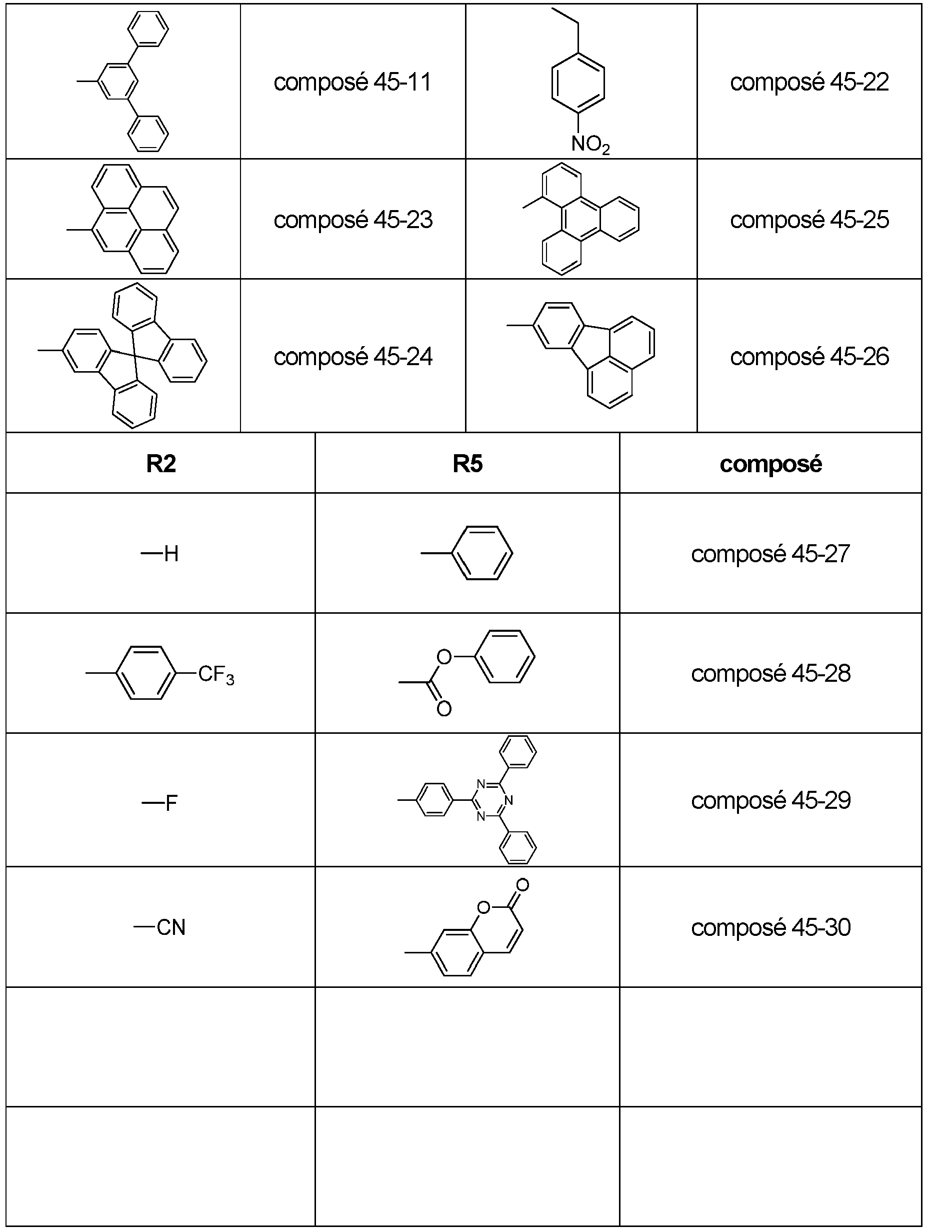 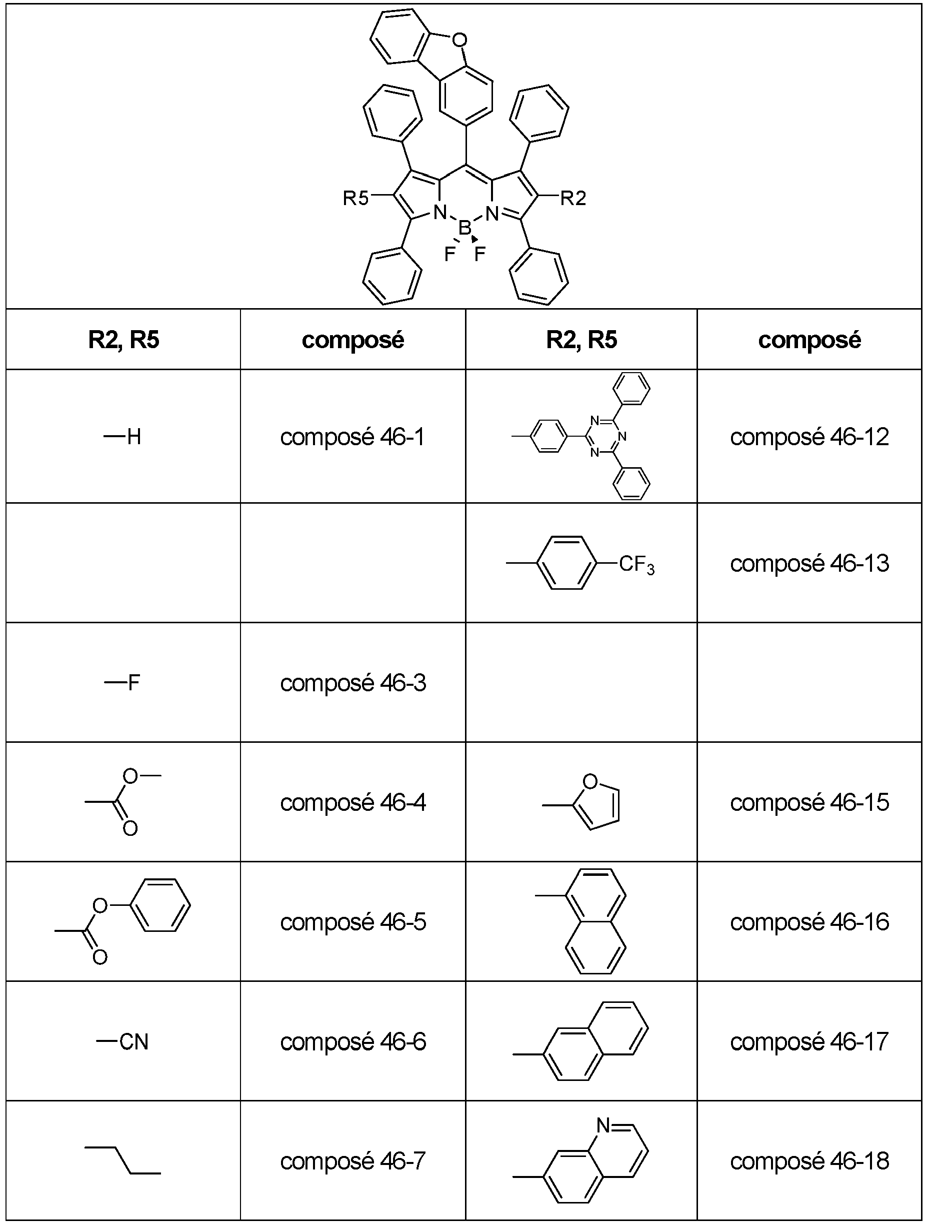 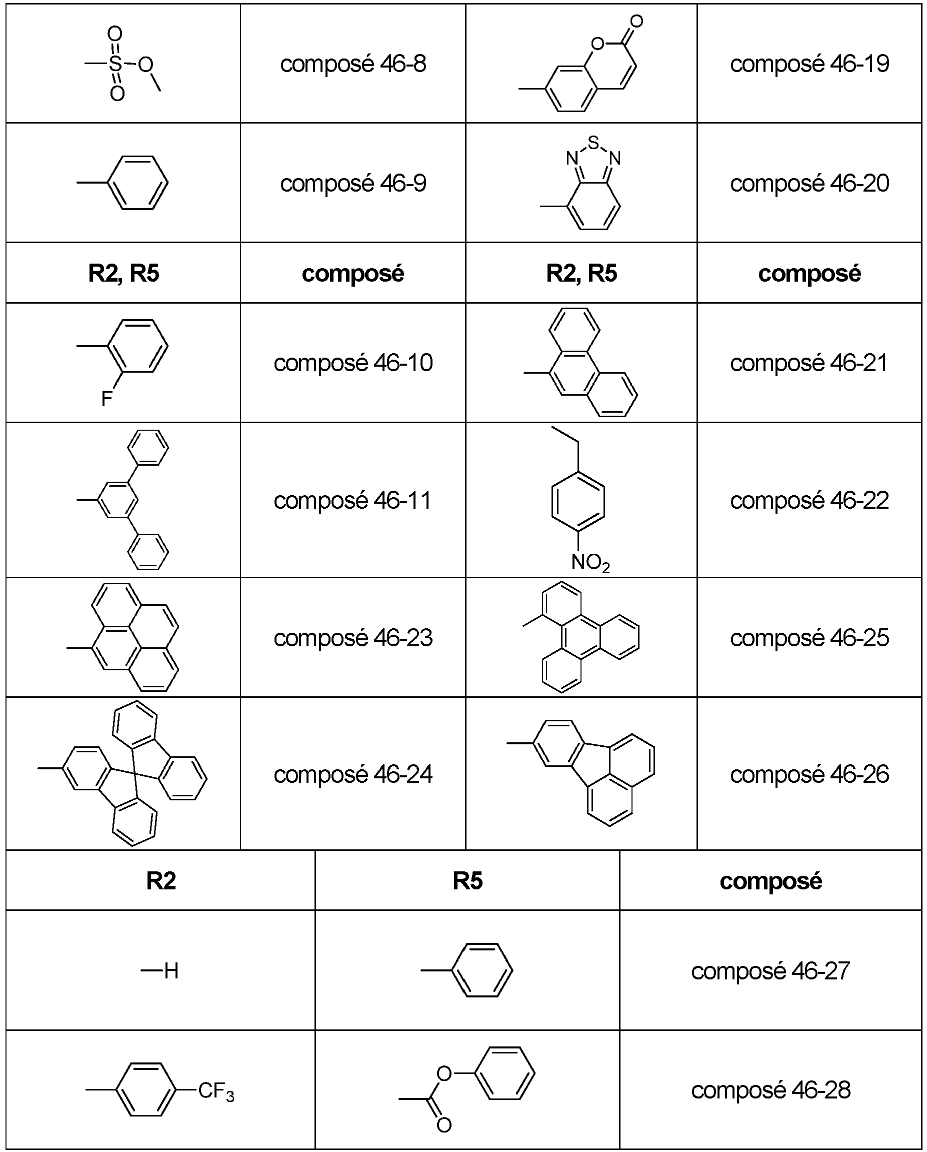 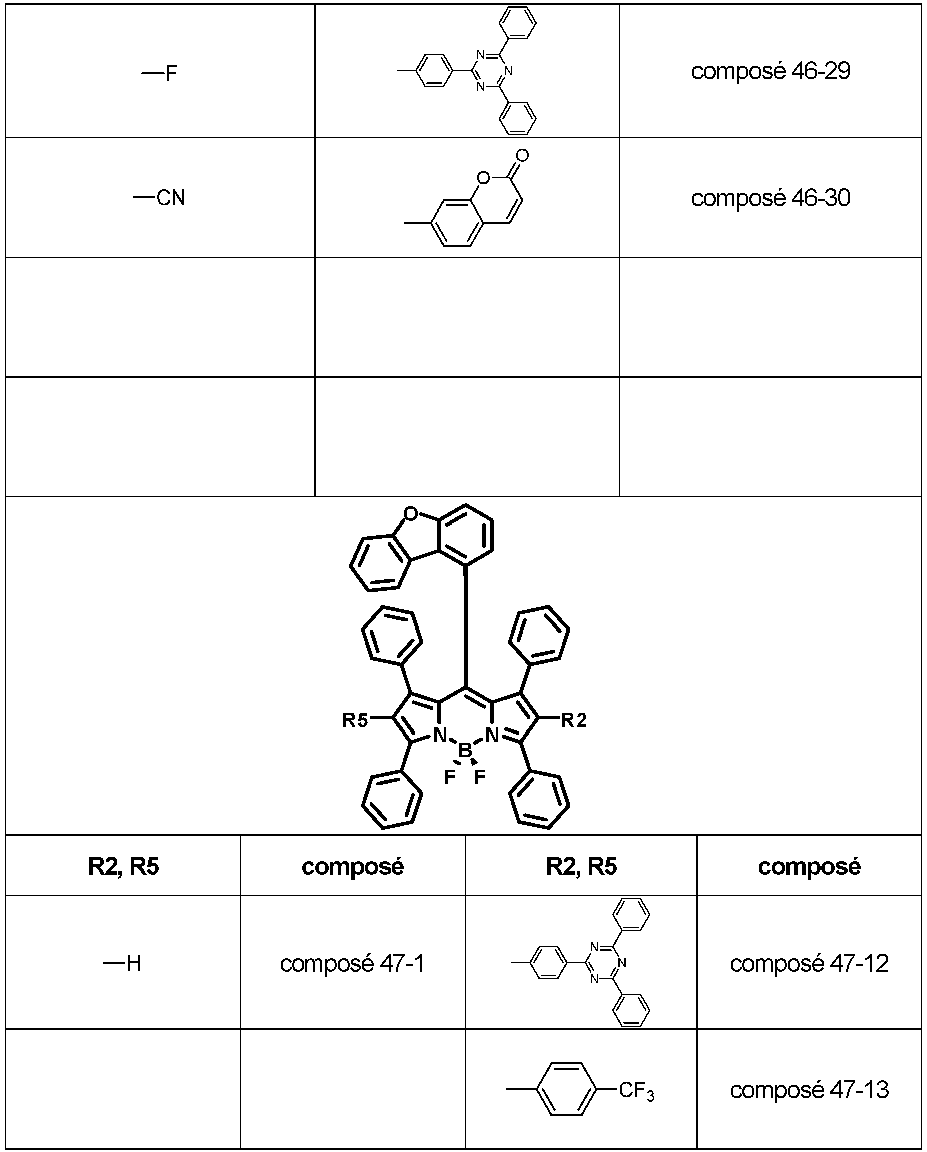 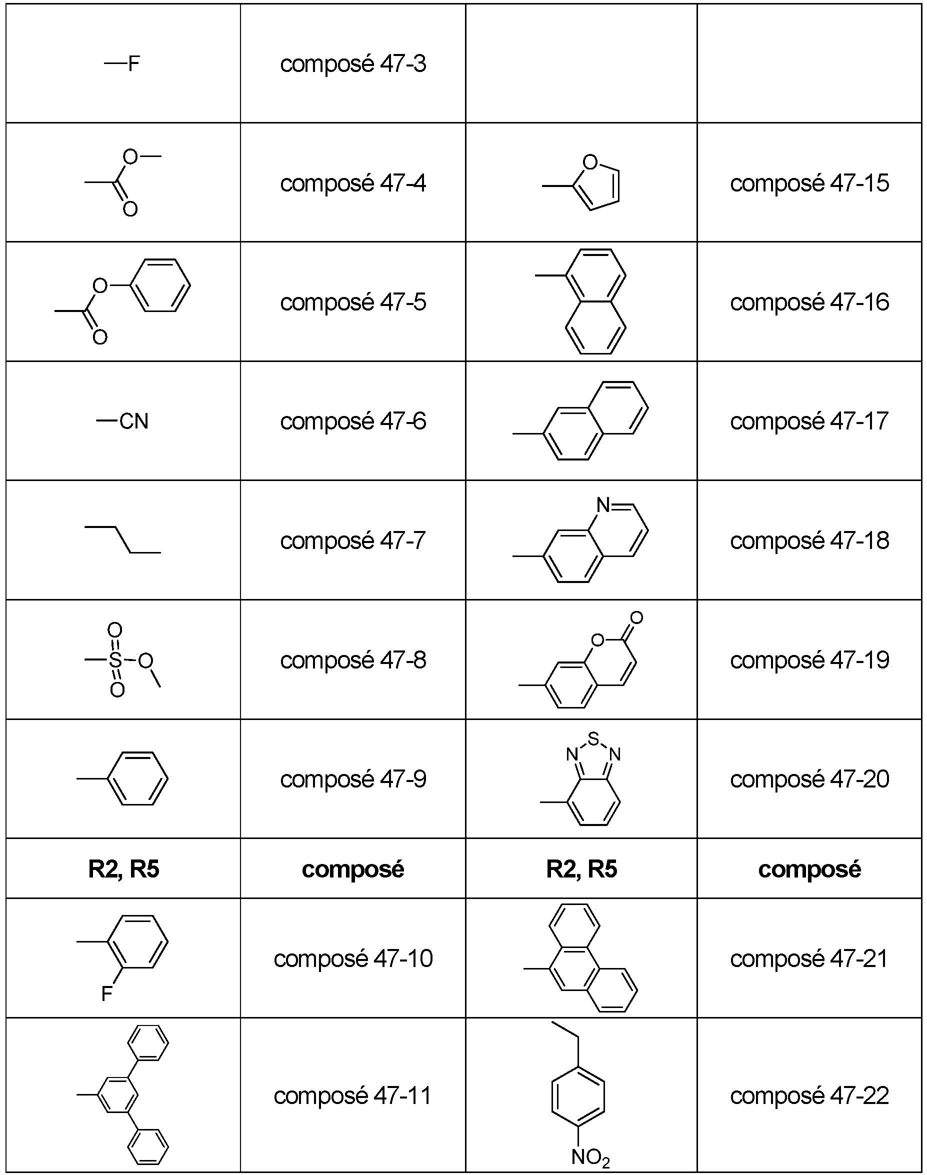 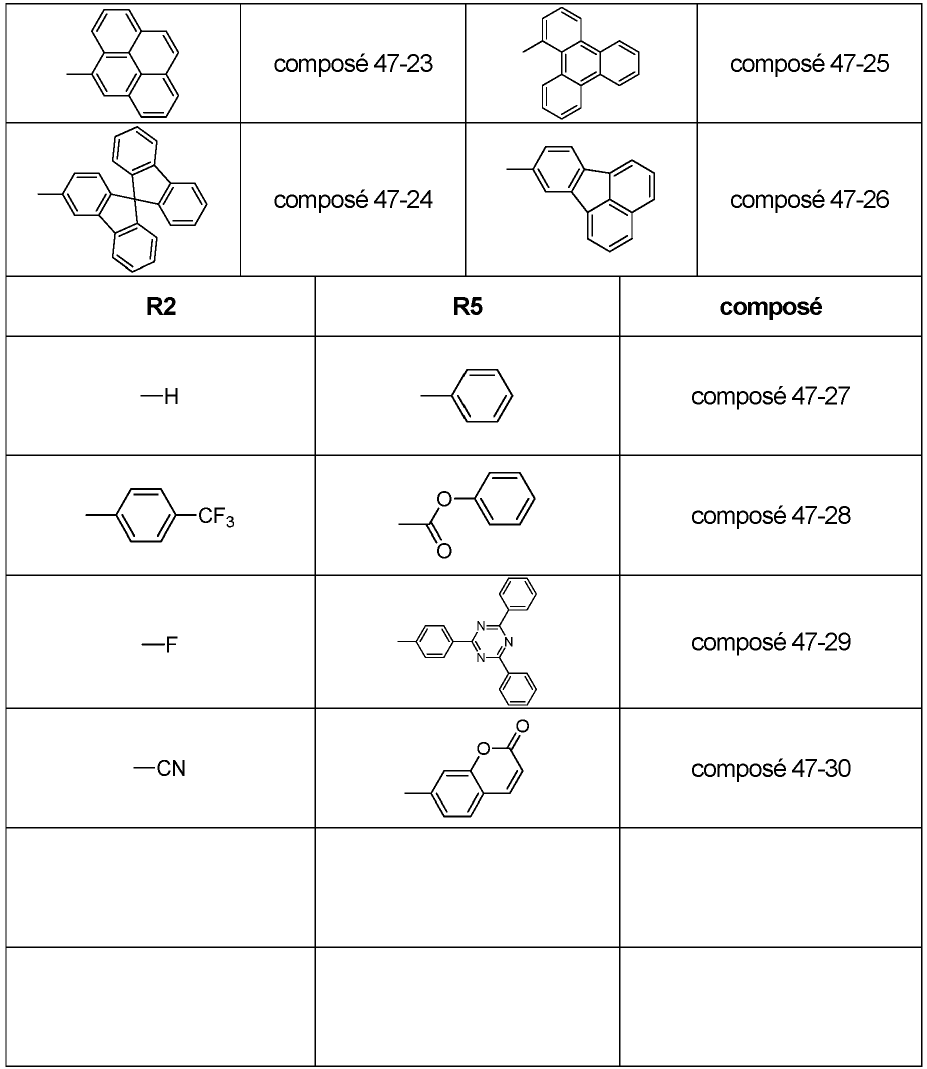 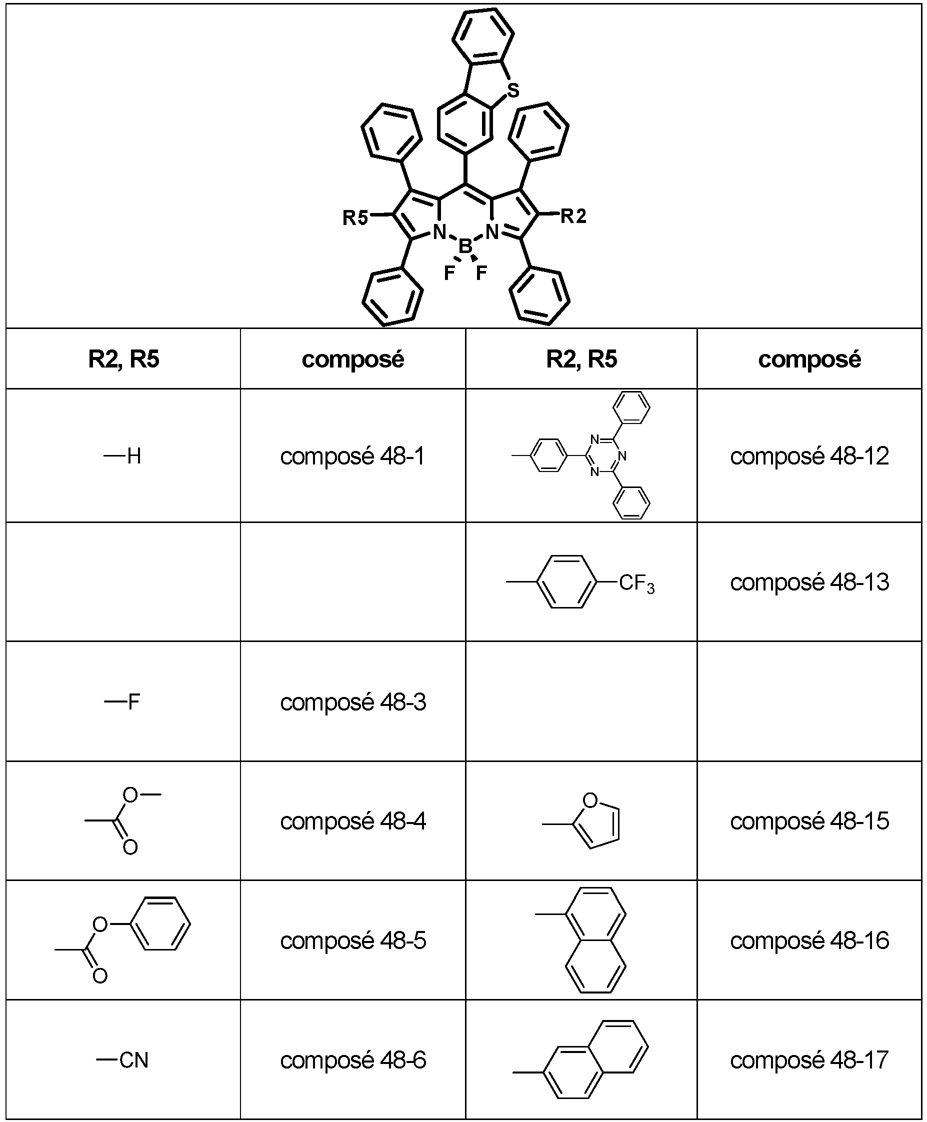 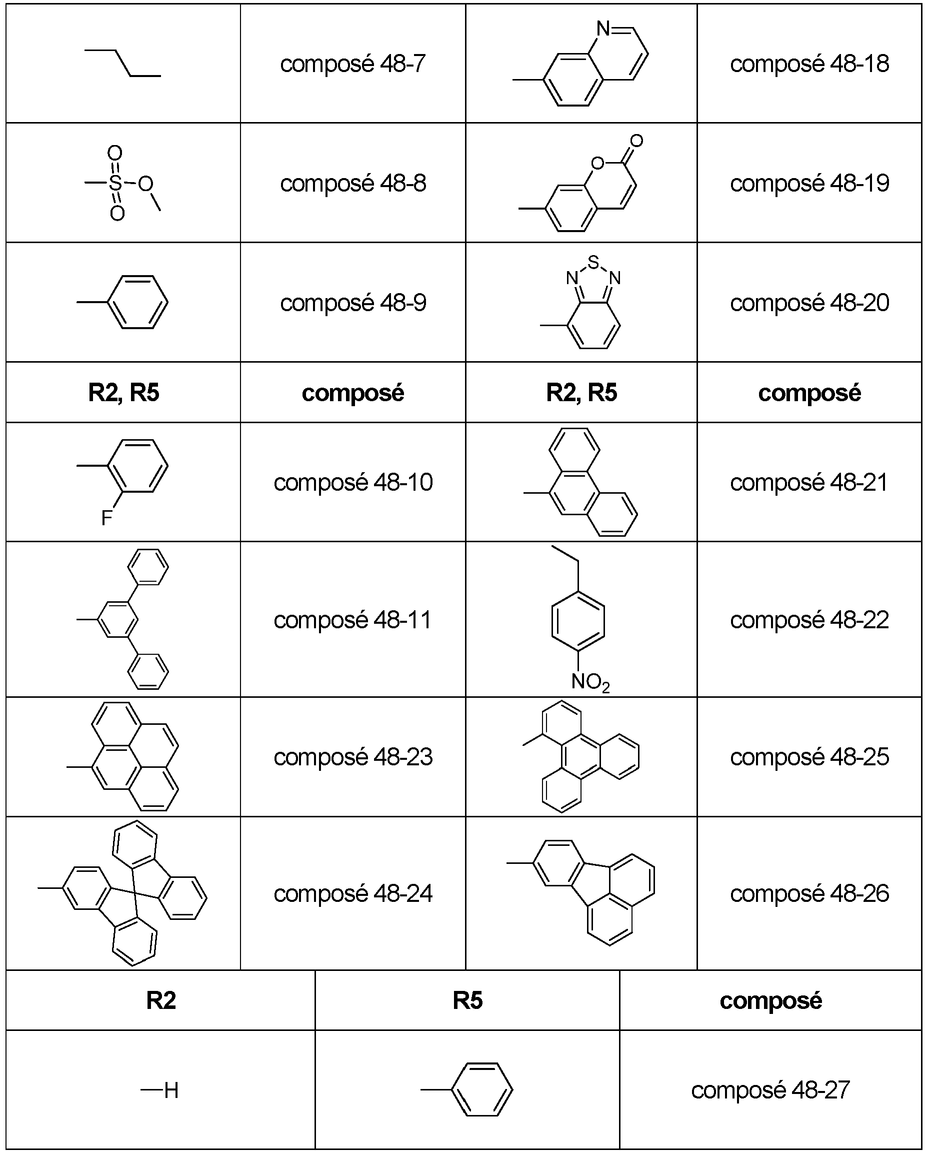 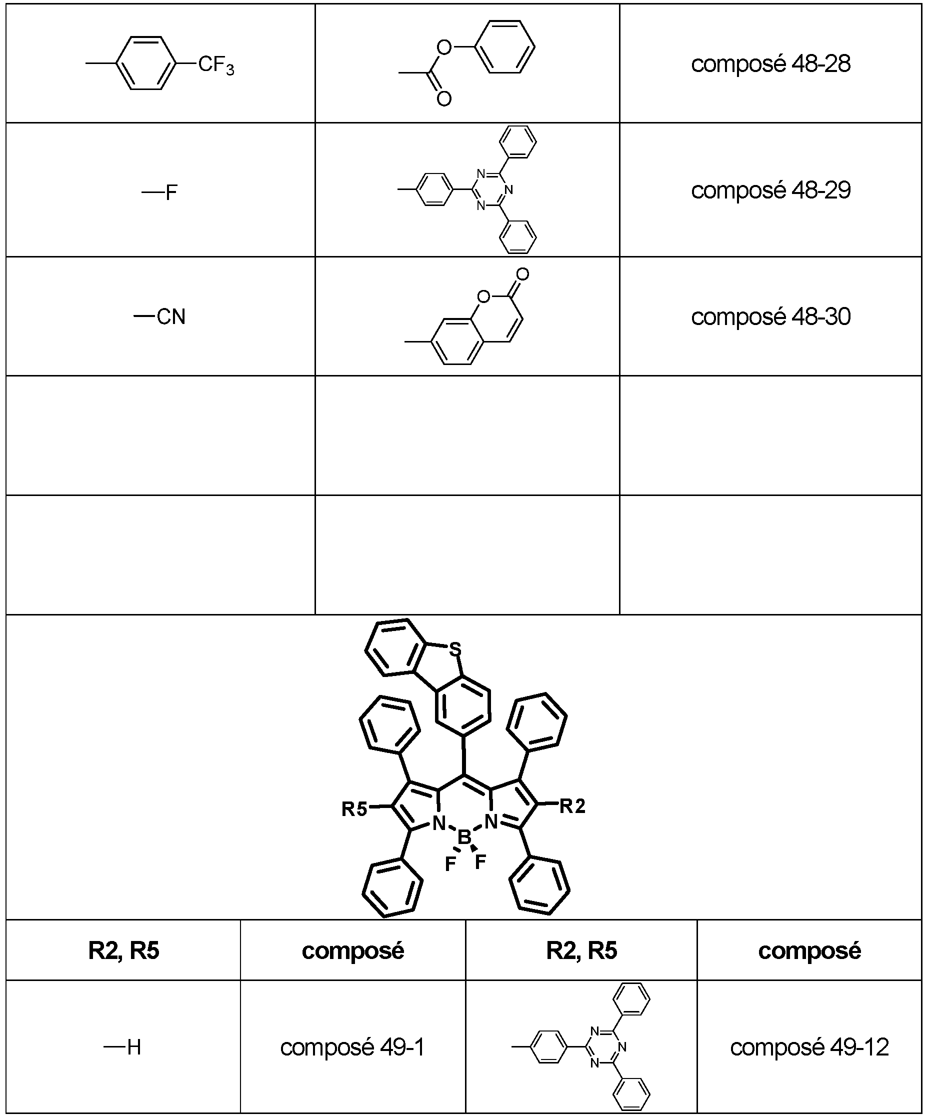 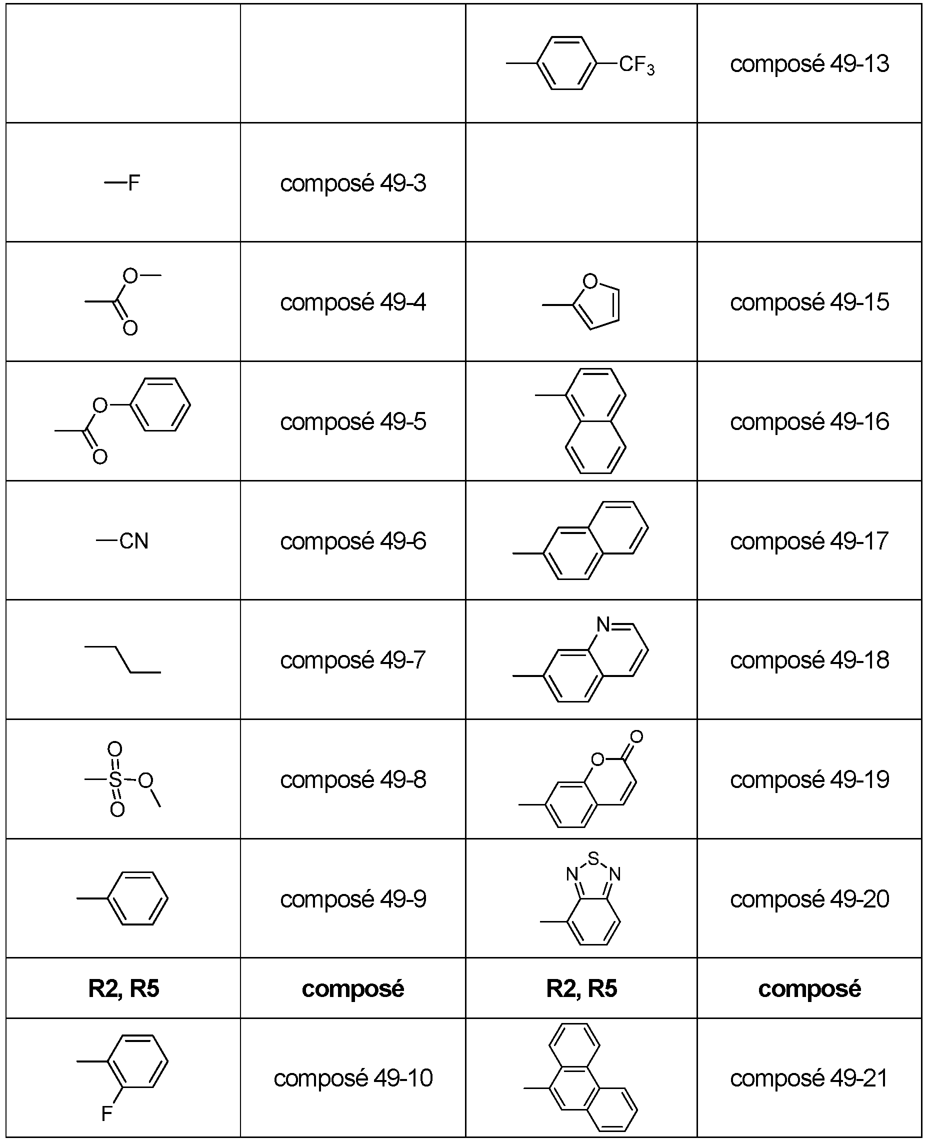 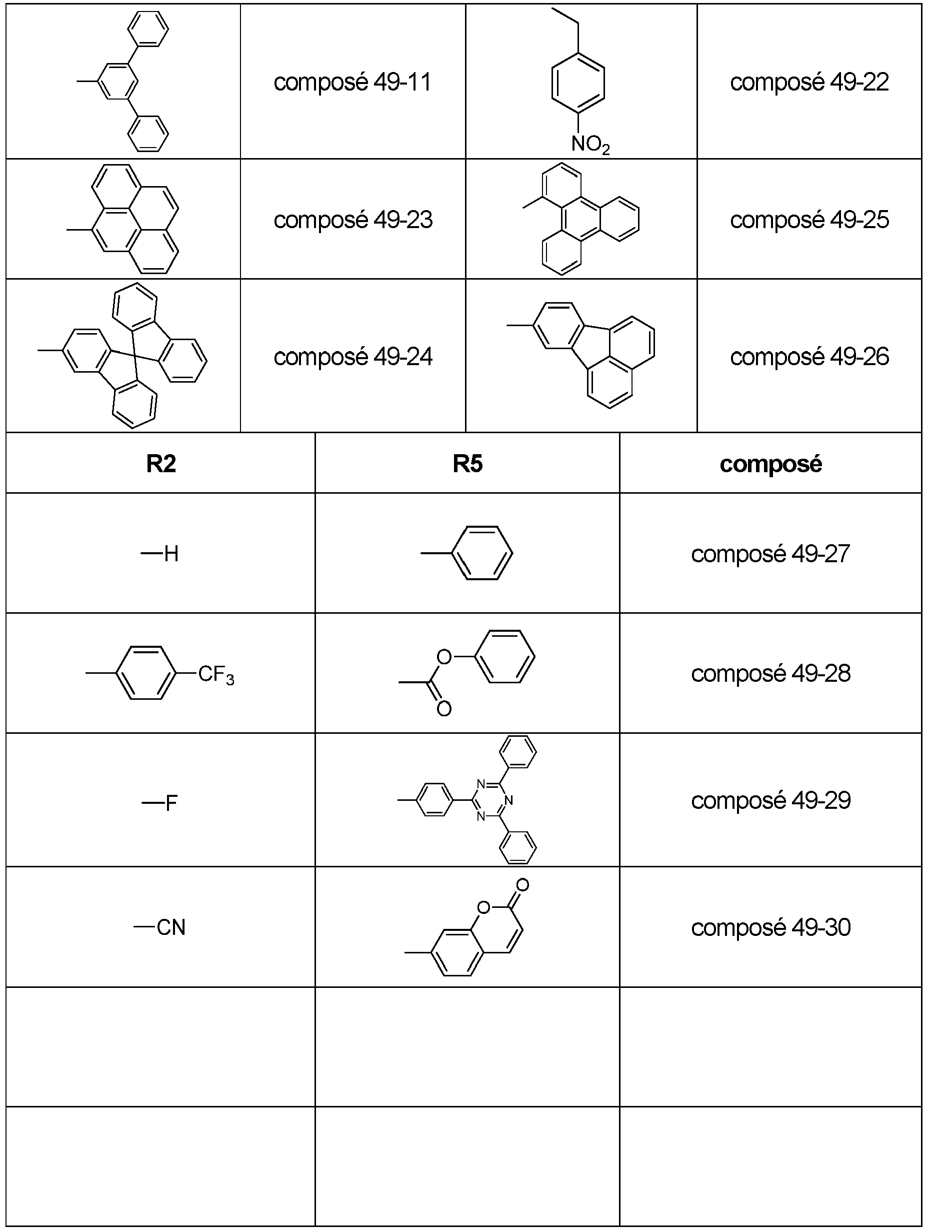 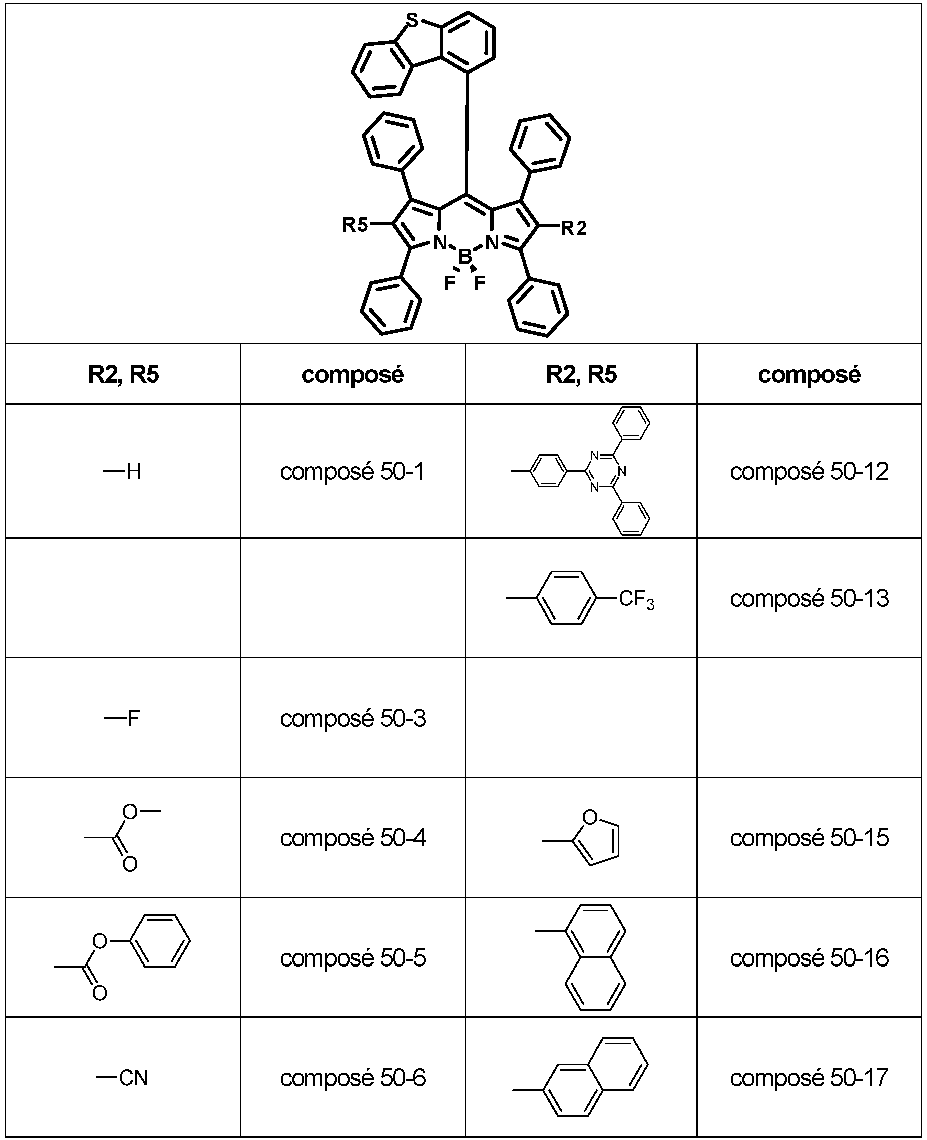 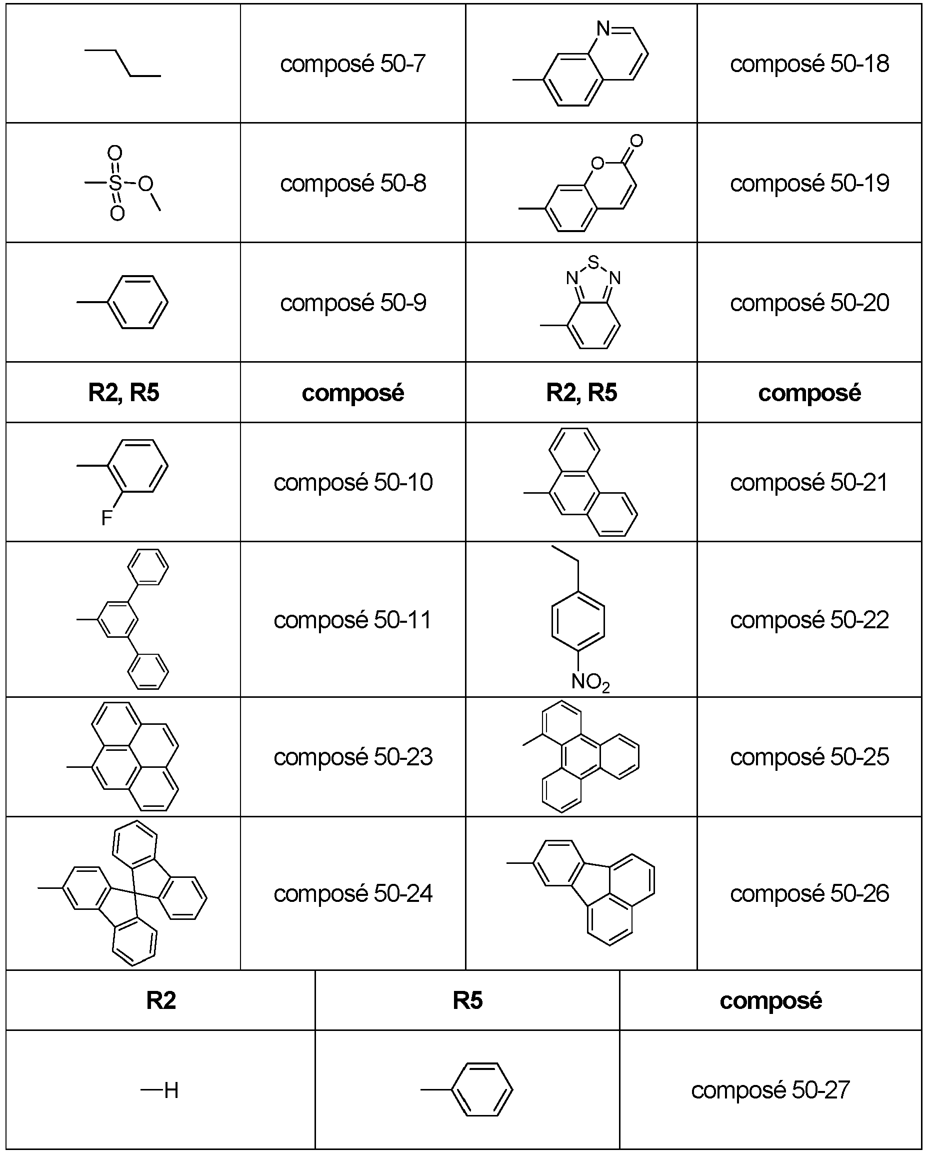 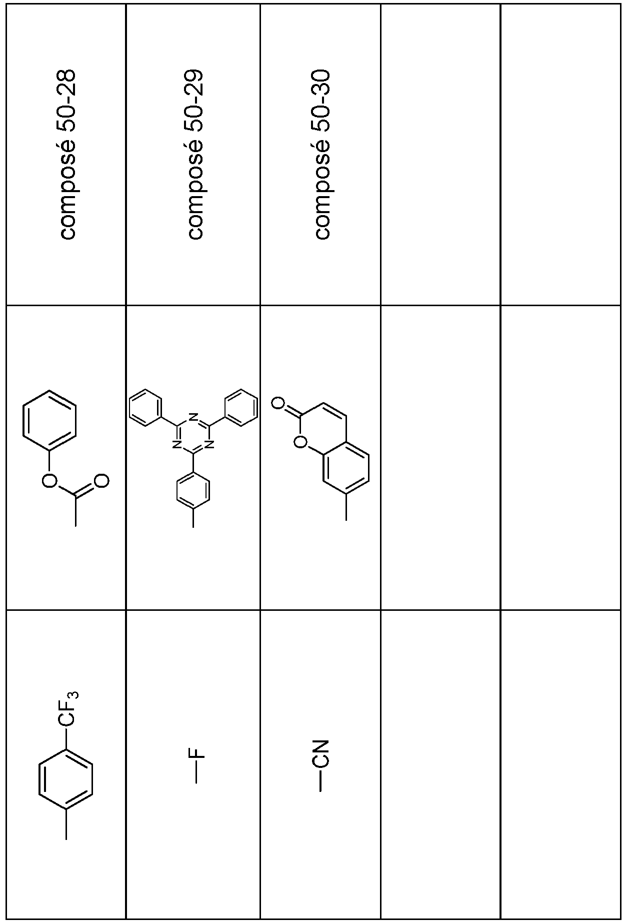
| | | | | | | | |
|---|---|---|---|---|---|---|---|
| 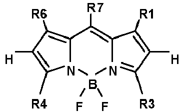 | | R7 | | | | | |
| R1, R6 | R3, R4 | 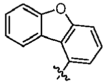 | 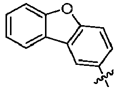 | 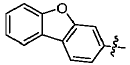 | 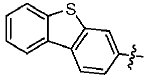 | 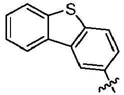 | 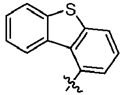 |
| 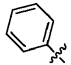 | 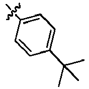 | composé 51-1 | composé 52-1 | composé 53-1 | composé 54-1 | composé 55-1 | composé 56-1 |
| | 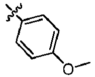 | composé 51-2 | composé 52-2 | composé 53-2 | composé 54-2 | composé 55-2 | composé 56-2 |
| | 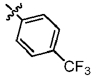 | composé 51-3 | composé 52-3 | composé 53-3 | composé 54-3 | composé 55-3 | composé 56-3 |
| | 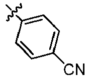 | composé 51-4 | composé 52-4 | composé 53-4 | composé 54-4 | composé 55-4 | composé 56-4 |
| 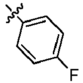 | 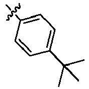 | composé 51-5 | composé 52-5 | composé 53-5 | composé 54-5 | composé 55-5 | composé 56-5 |
| | 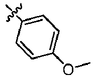 | composé 51-6 | composé 52-6 | composé 53-6 | composé 54-6 | composé 55-6 | composé 56-6 |
| | 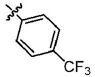 | composé 51-7 | composé 52-7 | composé 53-7 | composé 54-7 | composé 55-7 | composé 56-7 |
| | 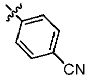 | composé 51-8 | composé 52-8 | composé 53-8 | composé 54-8 | composé 55-8 | composé 56-8 |
| 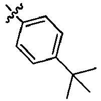 | 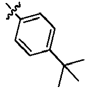 | composé 51-9 | composé 52-9 | composé 53-9 | composé 54-9 | composé 55-9 | composé 56-9 |
| | 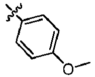 | composé 51-10 | composé 52-10 | composé 53-10 | composé 54-10 | composé 55-10 | composé 56-10 |
| | 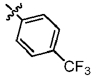 | composé 51-11 | composé 52-11 | composé 53-11 | composé 54-11 | composé 55-11 | composé 56-11 |
| | 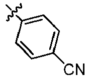 | composé 51-12 | composé 52-12 | composé 53-12 | composé 54-12 | composé 55-12 | composé 56-12 |

8. Film de conversion des couleurs comprenant :
une matrice de résine ; et
le composé représenté par la formule chimique 1 de l'une des revendications 1 à 7 dispersé dans la matrice de résine.

9. Unité de rétro-éclairage comprenant le film de conversion des couleurs selon la revendication 8.

10. Appareil d'affichage comprenant l'unité de rétro-éclairage selon la revendication 9.
